# EUROPEAN PATENT APPLICATION

(11) **EP 0 614 155 A2**
(43) Date of publication of application: **07.09.1994**
(21) Application number: 94301472.0
(22) Date of filing: 01.03.1994
(51) Int. Cl.: G06F 15/70, G08B 13/194

(54) **Motion detection system**

(30) Priority: 05.03.1993 IL 10496793
(71) Applicant: ELTA ELECTRONICS INDUSTRIES LTD., Ashdod 77102 (IL)
(72) Inventor: Avitzour, Daniel, Jerusalem 93630 (IL)
(74) Representative: Hillier, Peter

(57) **Abstract**

A motion detection system including a motion direction definition receiver operative to accept a definition of at least one direction of motion, and a moving object detector operative to detect an object only if it is moving in one of the at least one directions of motion.

## Description

### FIELD OF THE INVENTION

The present invention relates to motion detection systems.

### BACKGROUND OF THE INVENTION

State of the art systems for monitoring sites to be protected and identifying what appear to be moving objects include the following systems: the DS-1 and DS-16 digital video motion detectors, commercially available from DigiSpec Corporation, CA, USA, the David 200, commercially available from Senstar Inc., MA, USA, the Geutebruck VS-30, commercially available from Geutebruck GmbH of West Germany, the Adpro VMD-10, commercially available from Vision Security Inc., NJ, USA, the MOVICOM, commercially available from Hymaton RJS Industries, P.O.B. 3426, Santa Fe Springs, CA, USA, and the Digiplex 4000 commercially available from Vision Research Company Ltd., 2 Marples Way, Havant, Hampshire, UK.

### SUMMARY OF THE INVENTION

The present invention seeks to provide an improved motion detection system.

There is thus provided in accordance with a preferred embodiment of the present invention a motion detection system including a motion direction definition receiver operative to accept a definition of at least one direction of motion, and a moving object detector operative to detect an object only if it is moving in one of the at least one directions of motion.

There is also provided in accordance with another preferred embodiment of the present invention a motion detection system including a motion parameter definition receiver operative to accept at least one reference object characteristic of a moving object and at least one reference motion characteristic of the motion of the moving object, and a moving object detector operative to detect an object in motion, wherein at least one characteristic of the object corresponds to the at least one reference object characteristic and at least one characteristic of the motion corresponds to the at least one reference motion characteristic.

Further in accordance with a preferred embodiment of the present invention the at least one reference motion characteristic includes at least one reference actual motion characteristic which may be compared to at least one actual motion characteristic of an object in motion, computed from an image of an object in motion.

Still further in accordance with a preferred embodiment of the present invention the at least one reference motion characteristic includes at least one of the following characteristics: a reference maximum actual velocity, and a reference minimum actual velocity.

Additionally in accordance with a preferred embodiment of the present invention the at least one reference motion characteristic includes a reference minimum actual distance in any of a predetermined plurality of directions.

Further in accordance with a preferred embodiment of the present invention the at least one reference object characteristic includes a reference actual characteristic of the object which may be compared to at least one actual characteristic of an object in motion, computed from an image of an object in motion.

Still further in accordance with a preferred embodiment of the present invention the at least one reference object characteristic includes a reference minimum size of the object.

There is also provided in accordance with another preferred embodiment of the present invention a motion detection system including a moving object detector operative to detect an object in motion, wherein at least one characteristic of the motion corresponds to at least one reference motion characteristic, and a human intruder identifier for identifying a detected moving object as resembling a human intruder.

There is also provided in accordance with another preferred embodiment of the present invention a motion tracking system including a representation of at least one scene from a site to be protected, an intensity change detector for detecting changes in intensity in the representation of the at least one scene to be protected, over time, a moving object identifier for identifying changes in intensity with predetermined characteristics, as a moving object, an object tracker for tracking the moving object, and trajectory display apparatus for displaying the trajectory of the moving object.

Further in accordance with a preferred embodiment of the present invention the object tracker includes a motion characteristic memory operative to store at least one motion characteristic of the moving object.

There is also provided in accordance with another preferred embodiment of the present invention a motion detection system including a motion detector operative to detect motion within a sequence of images of a site to be protected, and a faulty imaging analyzer operative to provide an output indication of faulty imaging of the site to be protected.

Further in accordance with a preferred embodiment of the current invention the motion detection system also includes current location display apparatus for displaying the current location of the moving object.

There is also provided in accordance with another preferred embodiment of the present invention a motion tracking system including a representation of at least one scene of a site to be protected, an intensity change detector for detecting changes in intensity in the representation of the scene to be protected, over time, and a distance-to-camera dependent moving object identifier for identifying a change in intensity corresponding to at least one predetermined actual characteristic of the scene, as a moving object, wherein the relationship between the predetermined actual characteristic and the image thereof depends on the distance between the moving object and the camera.

There is also provided in accordance with another preferred embodiment of the present invention a method for learning a scene of a site to be protected, the method including monitoring the scene to be protected during a motionless interval of time, and characterizing locations in the scene according to the amount of motion detected therein.

There is also provided in accordance with another preferred embodiment of the present invention a protected area monitoring camera replacement method including storing a first image of the protected area captured by a first camera, replacing the first camera with a second camera, conducting a comparison of a second image of the protected area captured by the second camera with the stored first image of the protected area captured by the first camera, and aligning the second camera according to a result of the comparison.

Further in accordance with a preferred embodiment of the present invention conducting the comparison includes selecting two reference points, and switching between the two images of the protected area and comparing locations of the two reference points, relative to the first image of the protected area, with the locations of the two reference points relative to the second image of the protected area.

Still further in accordance with a preferred embodiment of the present invention the at least one predetermined actual characteristic includes at least one characteristic of the moving object.

Additionally in accordance with a preferred embodiment of the present invention the at least one predetermined actual characteristic includes at least one characteristic of motion of the moving object.

Further in accordance with a preferred embodiment of the present invention the at least one characteristic of the moving object includes the size thereof.

Still further in accordance with a preferred embodiment of the present invention the at least one characteristic of motion includes at least one of the following characteristics: magnitude of velocity of the motion, direction of the motion, distance traveled along an individual direction.

Additionally in accordance with a preferred embodiment of the present invention including the camera replacement method includes selecting a portion of the scene for monitoring, such that at least one portion of the scene having a relatively large amount of motion is excluded.

There is also provided in accordance with another preferred embodiment of the present invention a motion detection system including an image capturing unit, a first decimator operative to reduce a first horizontal portion of a captured image to a first resolution, a second decimator operative to reduce a second horizontal portion of the captured image which is above the first portion, to a second resolution which is higher than the first resolution, and a motion detector operative to process the decimated first and second horizontal portions.

Further in accordance with a preferred embodiment of the present invention first and second criteria are employed to detect motion in the first and second horizontal portions respectively and wherein the first criterion differs from the second criterion.

There is also provided in accordance with another preferred embodiment of the present invention a motion detection system including an image capturing units operative to provide an image of a site to be protected including pixels of varying brightness, and a brightness-sensitive motion detector which is sensitive in different degrees to motion in areas of different brightnesses.

Further in accordance with a preferred embodiment of the present invention the brightness-sensitive motion detector includes a brightness range distorter operative to expand the range of low-brightness values and compress the range of high-brightness values.

There is also provided in accordance with another preferred embodiment of the present invention a motion detection system including an image capturing unit, an image comparing unit operative to receive sequentially captured images, compare them and identify motion with varying sensitivity, and a sensitivity varying unit operative to temporarily decrease the motion identification sensitivity of the image comparing unit when an input, indicating sequential images which substantially differ throughout their areas, is received from the image comparing unit.

There is also provided in accordance with another preferred embodiment of the present invention a video motion detection system including an image capturing unit operative to sequentially capture images of a scene to be protected, and an image comparing unit receiving sequentially captured images and providing a difference map indicative of differences between the sequentially captured images, and a difference map analyzer operative to identify difference values within the difference map which are discrepant relative to the difference values in its vicinity.

There is also provided in accordance with another preferred embodiment of the present invention a video motion detection system including an image capturing unit operative to sequentially capture images of a scene to be protected including background components and components which vary over time, the background components including high-contrast background areas and low-contrast background areas, an image comparing unit receiving and comparing sequentially captured images, and a background contrast dependent motion detector providing an output indication of motion with higher sensitivity in low-contrast areas and lower sensitivity in high-contrast areas.

Further in accordance with a preferred embodiment of the present invention the moving object identifier is operative to identify, as a moving object, a plurality of adjacent pixels which have each changed in intensity.

Still further in accordance with a preferred embodiment of the present invention the plurality of adjacent pixels defines an area and the plurality of adjacent pixels is identified as a moving object if the area exceeds a predetermined minimum area.

Additionally in accordance with a preferred embodiment of the present invention the plurality of adjacent pixels defines an area and the plurality of adjacent pixels is identified as a moving object if the area is less than a predetermined maximum area.

There is also provided in accordance with another preferred embodiment of the present invention a motion detection system for detecting motion of an object of predetermined size, the system including a memory operative to store a representation of a scene including a plurality of scene cells whose size is substantially less than the predetermined size of the object, and a scene cell motion detector operative to detect temporal variations in intensity at scene cell level.

Further in accordance with a preferred embodiment of the present invention the object of predetermined size includes a human being.

There is also provided in accordance with another preferred embodiment of the present invention a motion detection system including a local motion detector operative to detect intensity variations in a sequence of representations of a scene to be protected and to provide motion detection indications, and a global motion detector operative to suppress motion detection indications when global motion is identified.

Further in accordance with a preferred embodiment of the present invention the global motion detector includes a global intensity variation detector operative to identify variations of intensity over an area exceeding a predetermined threshold.

Still further in accordance with a preferred embodiment of the present invention the local motion detector includes a moving object identifier operative to identify pluralities of adjacent intensity variations as moving objects and wherein the global motion detector is operative to identify global motion by counting the number of moving objects.

There is also provided in accordance with another preferred embodiment of the present invention a motion detection system including an intensity variation detector operative to detect intensity variations within an image of a scene to be protected captured by a camera, and a camera input device operative to accept input relating to the camera's geometry, a real-world coordinate translator operative to provide translated signals including translations of the detected intensity variations into real-world coordinates.

Further in accordance with a preferred embodiment of the present invention the input relating to the camera's geometry includes the distance of the camera's optical axis from the ground, its focal length, its array size, and the inclination angle of the optical axis relative to the horizontal.

Still further in accordance with a preferred embodiment of the present invention the motion detection system also includes an object discriminator operative to identify moving objects and to discriminate between adjacent moving objects on the basis of the real-world distance therebetween.

Additionally in accordance with a preferred embodiment of the present invention the object discriminator is operative to discriminate between moving objects which are adjacent in time, on the basis of the real-world distance therebetween.

Further in accordance with a preferred embodiment of the present invention the object discriminator is operative to discriminate between moving objects which are adjacent in space, on the basis of the real-world distance therebetween.

Still further in accordance with a preferred embodiment of the present invention the motion detection system also includes an object motion output generator operative to generate output pertaining to an object's motion in real-world coordinates.

Additionally in accordance with a preferred embodiment of the present invention the object motion output generator is also operative to generate output pertaining to an object's size in real-world coordinates.

Further in accordance with a preferred embodiment of the present invention the motion detection system also includes an alarm receiving control signals from the object motion output generator.

There is also provided in accordance with another preferred embodiment of the present invention a motion detection system including a motion detector operative to detect motion by comparing adjacent images within a sequence of images of a scene to be protected, and a substantial motion output generator operative to identify instances of motion over at least a predetermined real-world distance within a predetermined time period.

There is also provided in accordance with another preferred embodiment of the present invention a motion detection system including a motion detector operative to detect instances of motion by comparing adjacent images within a sequence of images of a scene to be protected, and a track memory storing information pertaining to previously encountered tracks and operative to associate instances of further motion along a currently stored track with the currently stored track, wherein tracks are stored in the track memory long enough so as to enable detected instances of intermittent motion to be associated with currently stored tracks.

Further in accordance with a preferred embodiment of the present invention the detected instances of intermittent motion include instances of genuinely intermittent motion.

Still further in accordance with a preferred embodiment of the present invention the detected instances of intermittent motion include instances of low-contrast continuous motion which is detected only intermittently.

Additionally in accordance with a preferred embodiment of the present invention the faulty imaging analyzer is operative to detect instances of global low contrast.

Further in accordance with a preferred embodiment of the present invention the faulty imaging analyzer is operative to detect a proliferation of motion over a predetermined period of time.

Still further in accordance with a preferred embodiment of the present invention the proliferation of motion includes an excessive number of moving objects.

Additionally in accordance with a preferred embodiment of the present invention the proliferation of motion includes an area in motion whose size exceeds a predetermined size.

Further in accordance with a preferred embodiment of the present invention comparing includes marking at least one location of the protected area, and comparing the portion of the protected area corresponding to the at least one locations, in the two images.

There is also provided in accordance with another preferred embodiment of the present invention a motion detection system including a moving object detector operative to process an image of a scene so as to detect an instance of motion, using a current definition of motion, and a motion definition generator operative to generate the current definition of motion in accordance with an external input.

There is also provided in accordance with another preferred embodiment of the present invention a motion detection system including a moving object detector operative to process an image of a scene so as to detect an instance of motion, using a current definition of motion, and a time-dependent motion definition generator operative to generate a time-dependent current definition of motion.

Further in accordance with a preferred embodiment of the present invention the motion definition generator includes a time-dependent motion definition generator operative to generate a current definition of motion which is both time-dependent and dependent on the external input.

Still further in accordance with a preferred embodiment of the present invention monitoring includes counting changes of intensity in each of a plurality of locations within the scene to be protected during an intruderless interval of time, wherein changes of intensity over more than one threshold are each counted separately.

Additionally in accordance with a preferred embodiment of the present invention the motion detection system also includes selecting a threshold including a minimum change of intensity defining occurrences of motion.

### BRIEF DESCRIPTION OF THE DRAWINGS AND APPENDICES

The present invention will be understood and appreciated from the following detailed description, taken in conjunction with the drawings in which:
Fig. 1A is a generalized block diagram of a motion detection system constructed and operative in accordance with a preferred embodiment of the present invention;
Fig. 1B is an illustration of an initial control screen display generated by a control monitor of the intruder detection system of Fig. 1A;
Fig. 2 is an illustration of a control screen display generated in response to a user's selection of option 1 on the control screen of Fig. 1B;
Figs. 3 - 6 are illustrations of control screen displays generated in response to a user's selection of options 1, 2, 3 and 5, respectively, on the control screen of Fig. 2;
Figs. 7 - 10 are illustrations of control screen displays generated in response to a user's selection of options 1 - 4, respectively, on the control screen of Fig. 6;
Fig. 11 is an illustration of a control screen display generated in response to a user's selection of option 6 on the control screen of Fig. 2;
Figs. 12 - 13 are illustrations of sequential control screen displays generated in response to a user's selection of option 7 on the control screen of Fig. 2;
Fig. 14 is an illustration of a control screen display generated in response to a user's selection of option 2 on the control screen of Fig. 1B;
Fig. 15 is an illustration of a control screen display generated in response to a user's selection of option 1 on the control screen of Fig. 14;
Figs. 16 - 17 are illustrations of sequential control screen displays generated in response to a user's selection of option 2 on the control screen of Fig. 14;
Fig. 18 is an illustration of a control screen display generated in response to a user's selection of option 3 on the control screen of Fig. 1B;
Figs. 19 - 20 are illustrations of sequential control screen displays generated in response to a user's selection of option 1 on the control screen of Fig. 18;
Figs. 21 - 22 are illustrations of sequential control screen displays generated in response to a user's selection of option 2 on the control screen of Fig. 18;
Figs. 23 - 25 are illustrations of control screen displays generated in response to a user's selection of options 3, 4 and 5, respectively, on the control screen of Fig. 18;
Fig. 26 is an illustration of a control screen display generated in response to a user's selection of option 5 on the control screen of Fig. 1B;
Figs. 27 - 29 are illustrations of control screen displays generated in response to a user's selection of options 1, 2 and 3, respectively, on the control screen of Fig. 26;
Figs. 30A and 30B are illustrations of sequential screen displays provided on a protected site displaying monitor upon occurrence of an alarm event;
Fig. 31A - E are illustrations of control screen displays generated in response to a user's selection of option 4 on the control screen of Fig. 1B;
Fig. 32 is an illustration of a control screen display generated in response to a user's selection of option 4 on the control screen of Fig. 2;
Fig. 33 is an illustration of a control screen display generated in response to a user's selection of an EXTERNAL ACTIONS option selected by pressing key F9 on the screen of Fig. 31E;
Figs. 34 - 35 are illustrations of sequential control screen displays generated in response to a user's selection of option 3 on the screen of Fig. 33;
Fig. 36 is an illustration of a control screen display generated in response to a user's selection of option 4 on the control screen of Fig. 33; and
Fig. 37 is a schematic block and connection diagram of the electronic circuitry of the apparatus of Fig. 1A.

Attached herewith are the following appendices which aid in the understanding and appreciation of one preferred embodiment of the invention shown and described herein:

Appendix A is a computer listing of software components forming part of a preferred embodiment of the present invention;

Appendix B is a netlist, including a part list, of a preferred implementation of hardware components forming part of a preferred embodiment of the present invention;

Appendix C is a set of programming files for programmable components forming part of a preferred embodiment of the present invention.

### DETAILED DESCRIPTION OF PREFERRED EMBODIMENTS

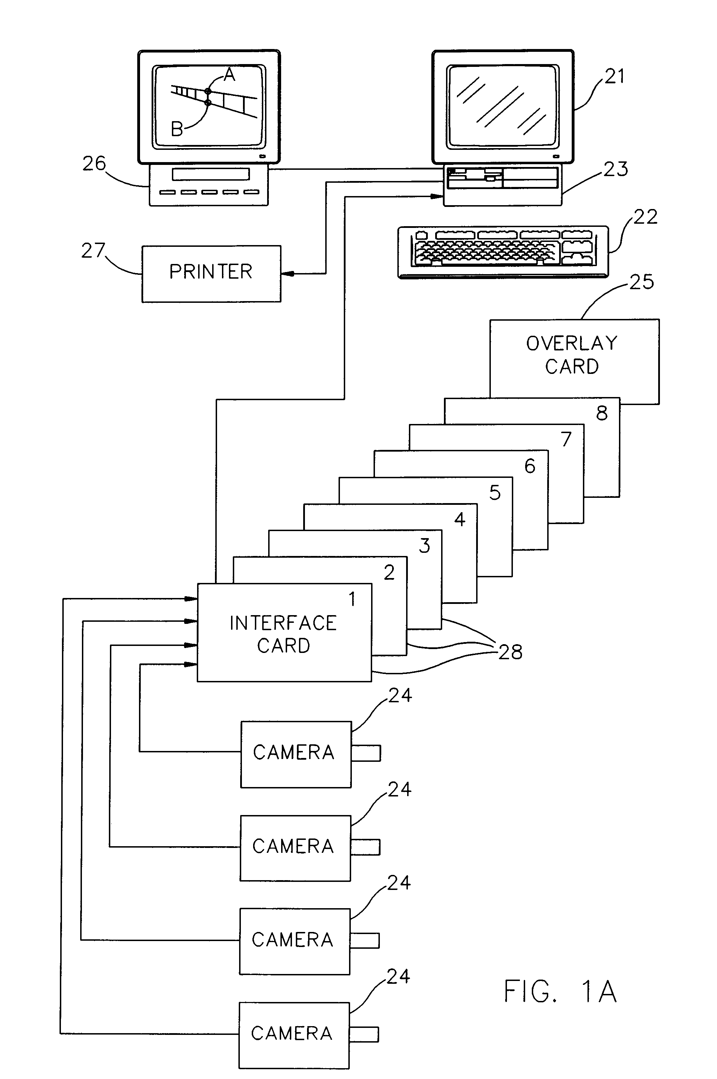

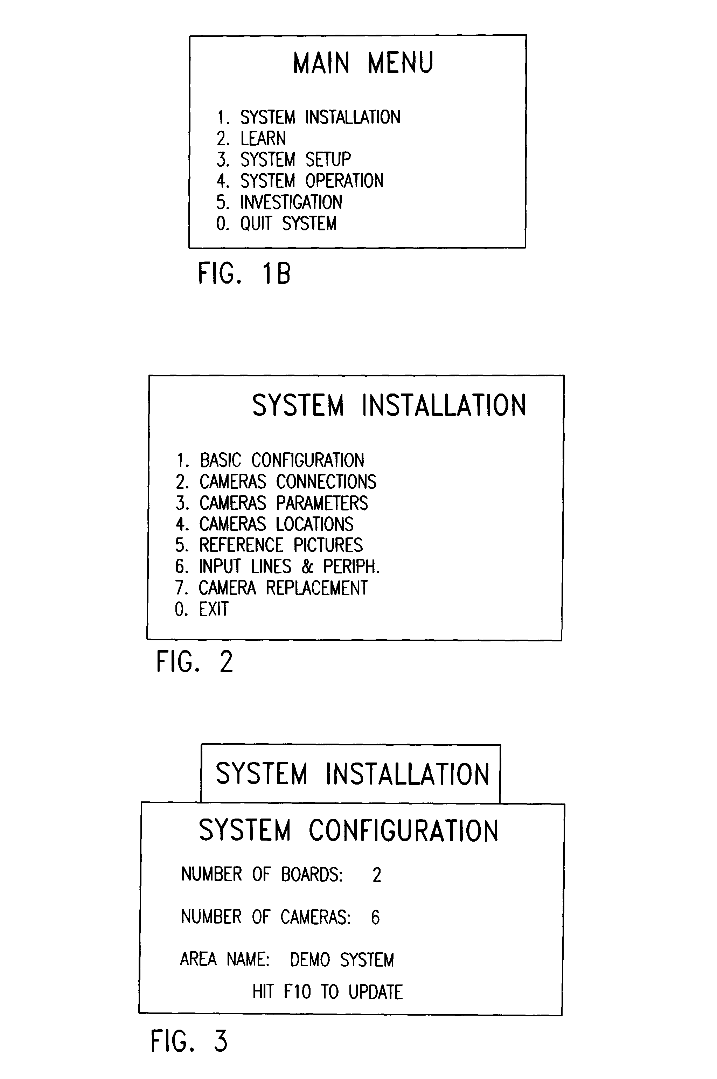

Reference is now made to Fig. 1A which is a generalized block diagram of a motion detection and tracking system suitable for both indoor and outdoor use which is constructed and operative in accordance with a preferred embodiment of the present invention. The apparatus of Fig. 1A typically includes a B/W CCTV monitor 20, on which a camera's view of a site to be protected is displayed. Also provided is an operatively associated control screen 21, such as a color graphic monitor, associated with a suitable control input device 22 such as a keyboard, and a central processing unit 23 such as an IBM AT PC, model 386 or 486. The operation of control screen 21 is best understood with reference to Figs. 1B - 29, 31 - 36 which are typical screen displays generated by control screen 21.

It is appreciated that the description of the present invention which refers to Figs. 1B - 29, 31 - 36 is not intended to limit the invention to the particular screen display sequence illustrated in Figs. 1B - 29, 31 - 36. Instead, the screen display sequence is described in some detail as a vehicle to providing a clear explanation of the functionality and structure of the system.

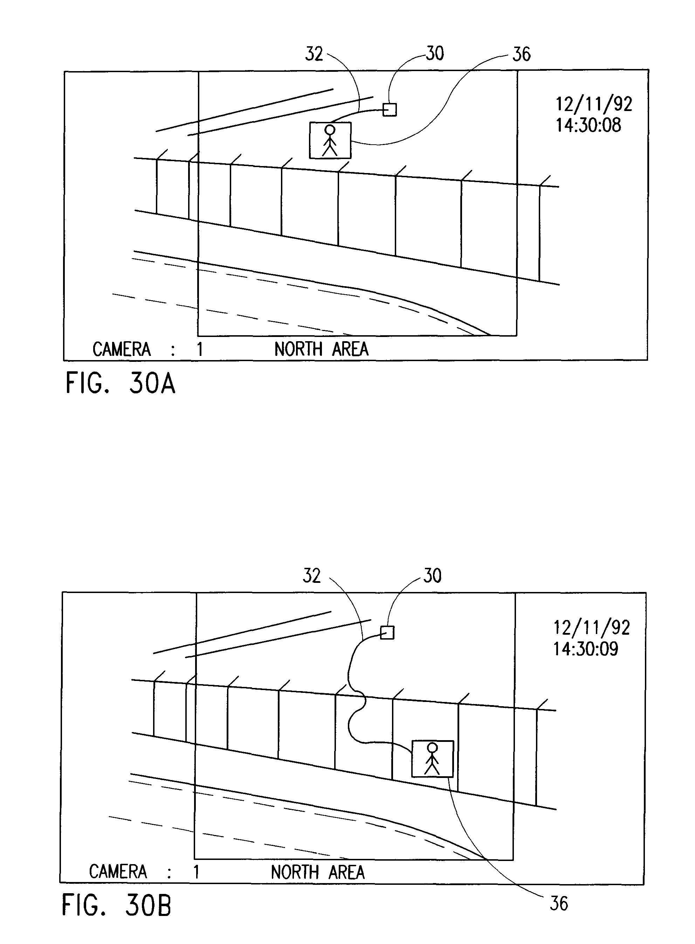

A graphic overlay card 25, such as a Galagraph VGS overlay card, commercially available from Galagraph, Bet T.A.T. Technologies Ltd., Gedera, P. O. B. 80, 70750, Israel, is provided, which generates graphic illustrations superimposed onto screen 20 such as but not limited to tracking of a moving entity, as shown in Figs. 30A and 30B, indications of motion locations, indications of a user-selected area of interest, and indications of camera number, name, date and time, as shown in Figs. 30A and 30B, and explained in detail below.

Optionally, a VCR device 26 may be provided, such as a Panasonic AG-7330, which is operative to record alarm events for off-line viewing.

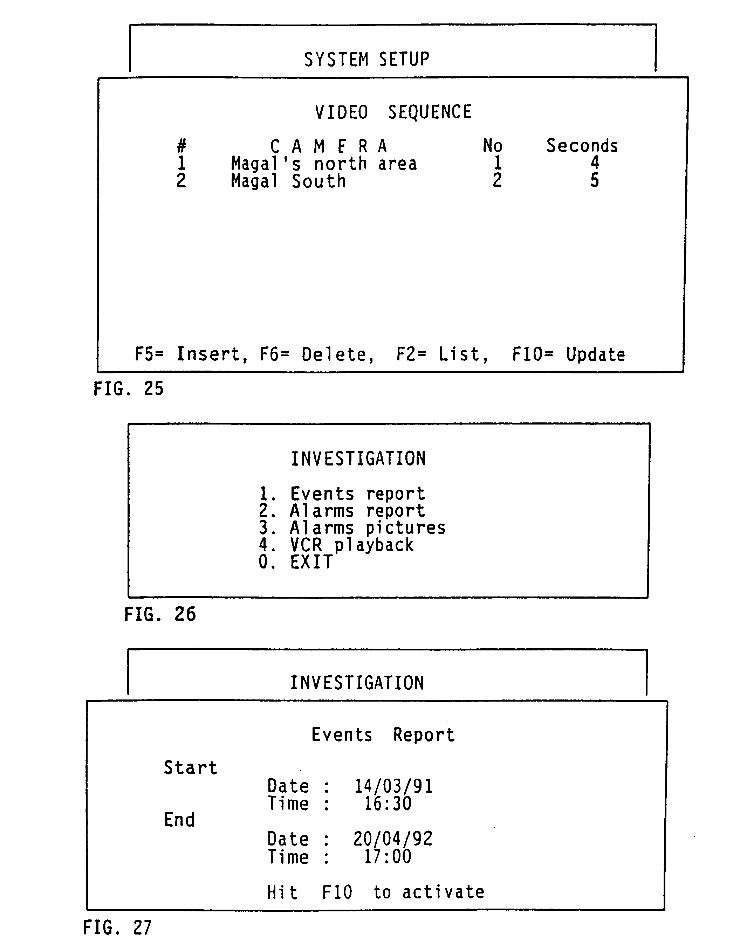

Optionally, a printer 27, such as an Epson LX-400, may be provided which is operative to generate alarm reports and event reports, as explained below with reference to Fig. 26.

Elements 20, 21, 22, 23, 25, 26 and 27 may be located at a location remote from the site to be protected and may receive images of the site to be protected via a plurality of cameras 24 located at the site, such as between 1 and 32 cameras. Any suitable camera may be employed, including but not limited to CCD cameras, IR cameras, thermal imaging cameras, and ICCD cameras. Cameras 24 are preferably arranged such that their combined field of view covers the entire site to be protected and also each other. The interface between cameras 24 and elements 20, 21, 22, 23, 25, 26 and 27 may be provided by up to 8 interface cards 28 such as those described in the netlist of Appendix B, each interfacing with up to four cameras 24.

If a plurality of cameras 24 are provided, the display 20 typically displays images viewed by each of the cameras 24, one at a time, in a predetermined sequence which is interrupted if an alarm event occurs within the image viewed by one of the cameras.

Preferably, priority sequencing is provided such that, if an alarm event occurs in a scene viewed by a particular camera, the scene viewed by that camera overrides scenes from other cameras for the purpose of display on screen 20.

Preferably, video signal failure, due, for example, to cutting of video cables, is recognized by the system. The system also preferably alarms when one of cameras 24 is obstructed.

A particular feature of the present invention is a low false alarm rate such that reliable detection of intruders is provided in day and night and in severe weather conditions.

Another particular feature of the present invention is that each camera can "learn" the scene assigned to that camera, during an "intruder-free" time interval, so as to identify "motion locations" or portions of the site to be protected in which motion occurs frequently. These portions may be displayed to the user so as to aid him in selecting an "area of interest" in which the system searches for a certain profile of motion and a certain profile of moving entity. Most advantageously, the user selects an area of interest which includes relatively few motion locations since motion locations are a potential source of false alarms.

Yet another particular feature of the present invention is that human characters and moving entities capable of concealing human characters can optionally be recognized from among detected moving entities. Since human characters and human concealing entities are only a subset of the detected moving entities, use of this option substantially reduces the false alarm rate of the system.

Typically, alarm parameters including the following are user-determined:
a. maximum intrusion velocity;
b. minimum object size;
c. risk directions, i.e. directions of motion which are considered threatening and therefore are to be monitored; and
d. distance to be covered in a risk direction before an alarm is indicated.

When the system computes actual velocities, sizes, directions and distances viewed by the cameras 24, camera parameter values provided to the system are taken into account, so as to reconstruct the 3-dimensional character of the site which, of course, is lost in two-dimensional images thereof.

System values for camera parameters employed for the 3-dimensional reconstruction typically include camera inclination, camera height, camera lens focal length and camera sensor size.

Another particular feature of the present invention is that a camera replacement procedure is provided which employs CCTV screen 20 to align a first camera to be replaced with a second camera which replaces the first camera. Preferably, the camera replacement procedure is as follows:
a. An image of the scene to be protected is captured using the first camera and is saved. This is typically performed during installation of the first camera.
b. The first camera is replaced by the second camera.
c. An image of the scene viewed by the second camera is compared to the image of the scene captured by the first camera so as to ascertain that the same locations in the scene appear in the same absolute locations on screen 20 or 21.
d. The image of the scene viewed by the second camera is saved for use when the second camera is replaced by a further camera.

For example, the user may define two locations on screen 20 or 21, denoted A and B in Fig. 1A, which correspond to two easily identifiable locations in the image captured by the first camera, such as two fence intersections. When the image of the scene captured by the second camera is displayed on screen 20 or 21, the same two fence intersections should be located at points A and B of screen 20 or 21. Otherwise, the user knows that the second camera is not aligned relative to the first camera.

Appendices A, B and C to the present specification, taken together, form a very detailed disclosure of a motion detection system constructed and operative in accordance with a preferred embodiment of the present invention. Appendices A, B and C are appended herewith merely in order to provide an extremely detailed description of a sample preferred embodiment of the present invention and are not intended to be limiting.

Appendix A to the present specification is a computer listing of software components forming part of a preferred embodiment of the present invention.

Appendix B to the present specification is a netlist, including a part list, of a preferred implementation of hardware components forming part of a preferred embodiment of the present invention.

Appendix C to the present specification is a set of programming files for programmable components forming part of a preferred embodiment of the present invention.

The following are instructions describing how to run and load the computer listing of Appendix A, the hardware components described in Appendix B, the programmable components described in Appendix C, all in conjunction with various commercially available components such as cameras:
a. Obtain and install the following commercially available components:
   IBM AT PC, model 386 or 486 with 4 megabyte memory, 1.2 megabyte diskette drive, at least 40 megabyte of hard disc, a VGA screen and a mouse;
   Software packages:
   QEMM, marketed by Quarterdeck Office Systems, Santa Monica, CA, USA;
   Dr. HALO, marketed by Media Cybernetics, Silver Spring, MD, USA;
   DOS 3.3 or higher, by Microsoft;
   VGS overlay card, marketed by Galagraph and a suitable cable;
   optionally, a Epson LX-400 printer;
   optionally, a Panasonic AG-7330 video tape recorder; and
   coaxial RG-58 type cables with BNC connectors for interconnecting the above elements.
b. Program the five programmable elements from among the elements in the part list of Appendix B, namely the elements entitled U37, U69, U73, U35 and U36, which comprise programmable components EPM 5032, EPM 5128, EPM 5128, PALC22V10 and PALC22V10, respectively, using the programming instructions of Appendix C. This step may be carried out as follows:
   To program each of elements U37, U69 and U73, do as follows: (I) Using the "debug" DOS command, generate three hexadecimal data files, entitled U37.POF, U69.POF and U73.POF, for the three elements respectively, using the hexadecimal listings included in Appendix C.
   (II) Using a PC with an Altera adapter for components EPM 5032, EPM 5128 and EPM 5128, load the three files generated in step (I), using Altera's Maxplus software.
   (III) program the three components, using the Maxplus software.

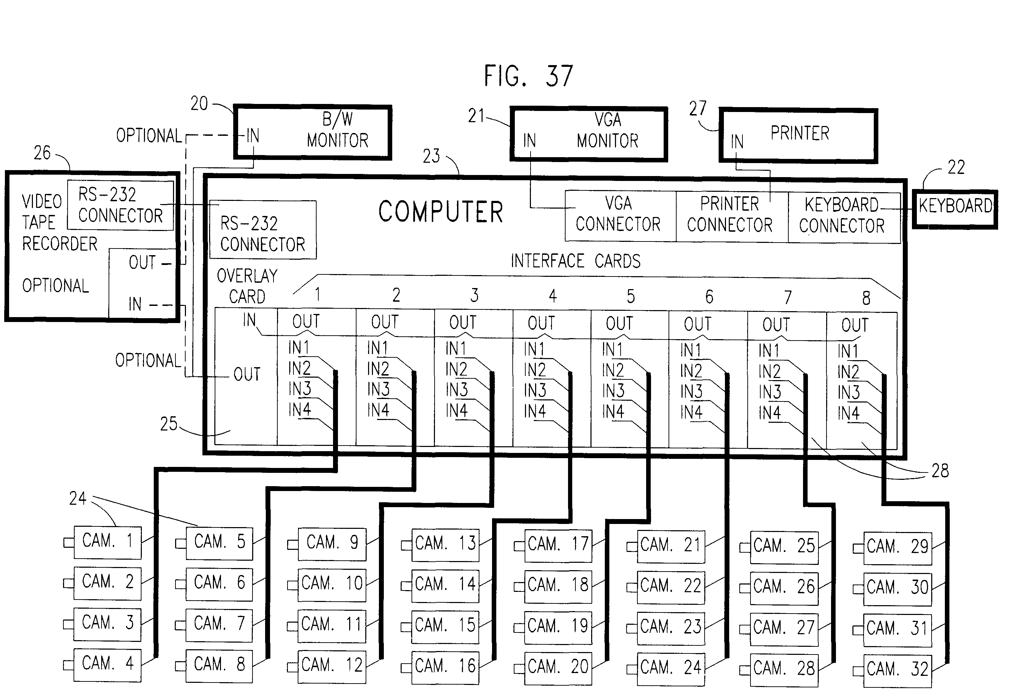

   To program each of elements U35 and U36, do as follows:
   (I) Using the "edlin" DOS command, generate two text data files, entitled U35.OUT and U36.OUT, for the two elements respectively, using the text listings included in Appendix C.
   (II) Using a PC with a Data I/O programmer, set up for component PALC22V10, download the two files generated in step (I).
   (III) program the two components, using the Data I/O software.
c. Construct one or more interface cards 28 in accordance with the netlist and partlist of Appendix B;
d. Insert the overlay card and the interface cards into the PC and connect as shown in Fig. 37.
e. Optionally, connect the printer and video tape recorder as shown in Fig. 37.
f. Load the DOS 3.3 operating system into directory c:\DOS of the PC.
g. Copy the file entitled Command.com from directory c:\DOS to c:\.
h. Generate text files entitled Autoexec.bat and Config.sys in directory c:\, using the listings of these files included in Appendix C.
i. Prepare a directory tree in c:\ as follows, using the "MD" DOS command:
   MGH
   MGH\STP
   MGH\REF
   MGH\LRN
   MGH\AOI
   MGH\PIC
   MGH_RUN
   DRHALO
   QEMM
j. Install the QEMM software in the PC, according to Quarterdeck's instructions.
k. Install the Dr. HALO software in the PC, according to Media Cybernetics' instructions.
1. Using the "debug" DOS command, generate the 29 hexadecimal files whose hexadecimal listings are included in Appendix C, each under the directory and file name indicated in the heading of each hexadecimal listing in Appendix A.
m. Generate a map of the site to be protected, using the Dr. HALO software installed in step k. Store the map under file-name "site.pic".
n. Copy the site.pic file from the c:\DRHALO directory to a file entitled "mgmap.scr" in the c:\MGH_RUN directory.
o. Run the IRS_TEST program in the c:\MGH_RUN directory to test the interface cards 28;
p. Operate the system by running the MGH file in the c:\MGH_RUN directory, which is one of the files generated in step l.
q. The control screen of Fig. 1B will now appear. Using options 1, 2 and 3 of the control screen illustrated in Fig. 1B, described in detail below, initialize the system.
r. To operate the system, use option 4 of the control screen illustrated in Fig. 1B.

Reference is now made to Fig. 1B which is an illustration of an initial control screen display which may be displayed on monitor 21 of Fig. 1A.

Options 1, 2 and 3 of Fig. 1B are employed during system initialization, as explained above. The "learn" option is performed specifically for an individual site to be protected, and is operative to identify motion locations which are a potential source of false alarms and therefore preferably should not be included in the selected "area of interest".

Option 4 sends the system of Fig. 1A to normal operation. A preferred mode of operation of the system of Fig. 1A is described in detail in the "run and load" instructions provided above, with reference to the Appendices attached herewith.

Option 5 relates to generation of summaries of all events occurring in a user-defined past period.

Fig. 2 is an illustration of a control screen display generated in response to a user's selection of option 1, i.e. system installation, on the control screen of Fig. 1B. Under option 1 of Fig. 2, as shown in Fig. 3, the number of cameras 24 is selected, the number of interface cards 28, which typically depends on the number of cameras, is selected, and the site to be protected ("protected area") is assigned a name.

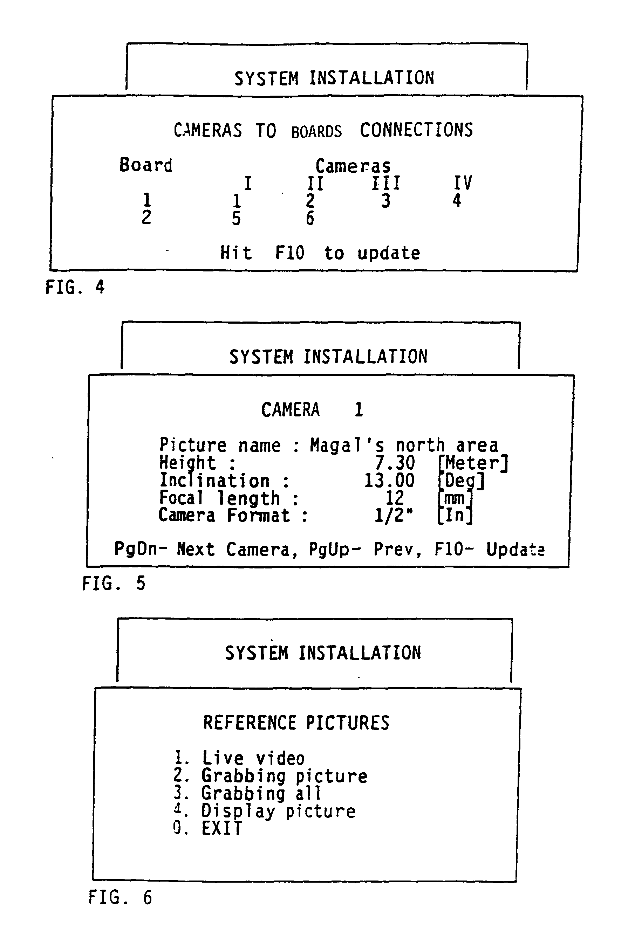

In option 2 of Fig. 2, as shown in Fig. 4, the connections of the various cameras to the various interface cards 28 are determined. In the illustrated example, 6 cameras are being employed. Cameras 1, 2, 3 and 4 are connected to inputs I, II, III and IV, respectively, of interface card I; and cameras 5 and 6 are connected to inputs I and II, respectively, of interface card II.

In option 3 of Fig. 2, as shown in Fig. 5, information regarding cameras 24 are reported to the system by the operator thereof. The camera parameters are used by the system to modify information pertaining to a particular location within the image of a site to take into account the distance of that location from the camera imaging the site. For example:
a. the ratio between the actual size of an entity and the imaged size thereof, depends on the distance of the entity from the camera imaging the entity.
b. the relationship between the actual distance traveled by an entity and the length of the image of the trajectory traveled depends on the distance of the traveling entity from the camera imaging the entity.
c. the relationship between the magnitude and direction of the actual velocity vector of a traveling entity and the magnitude and direction of the velocity vector as imaged, depends on the distance of the traveling entity from the camera imaging the entity.

Camera parameters may be different for each camera and typically include the height at which the camera is mounted, the inclination angle of the focal axis relative to the horizontal, the focal length of the camera lens, and the sensor size, or camera format, of the camera.

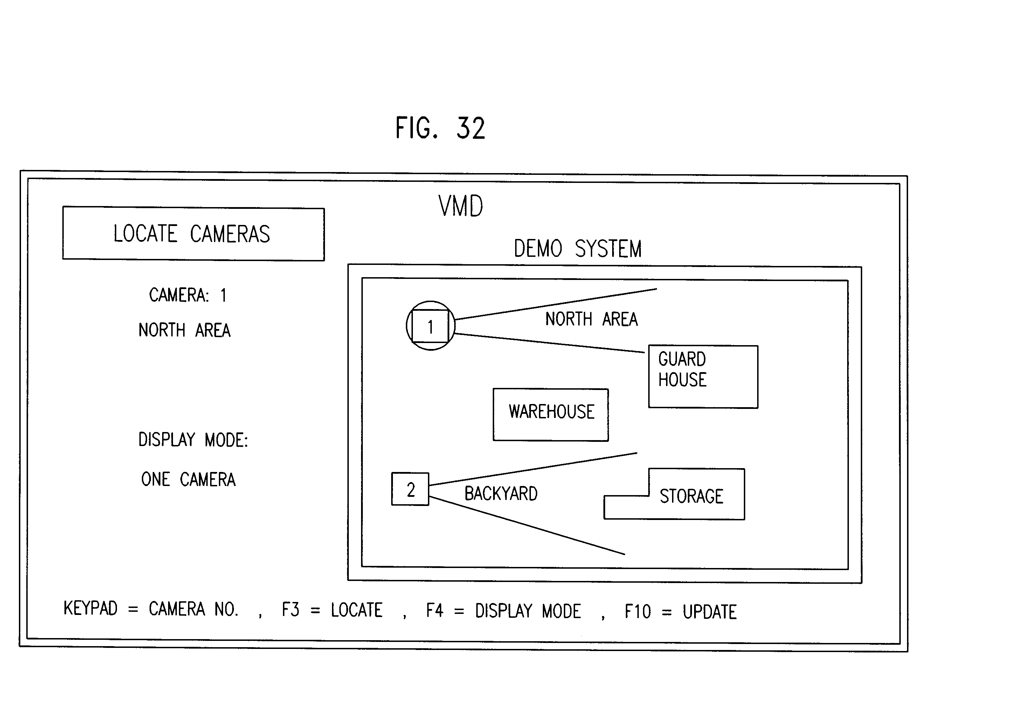

In option 4 of Fig. 2, the locations of the cameras within the site to be protected are reported to the system. This is possible because the system is already equipped with a map of the site to be protected which may be generated as described in the Run and Load instructions provided above. When option 4 is selected, the control screen of Fig. 32 appears. As shown in Fig. 32, the map of the site is displayed on the control screen 21 of Fig. 1A. The map typically includes a plurality of camera locations at which cameras may be located. The user is prompted to indicate which camera locations are populated by cameras, preferably by indicating, at each populated camera location, the number of the camera assigned to that camera location.

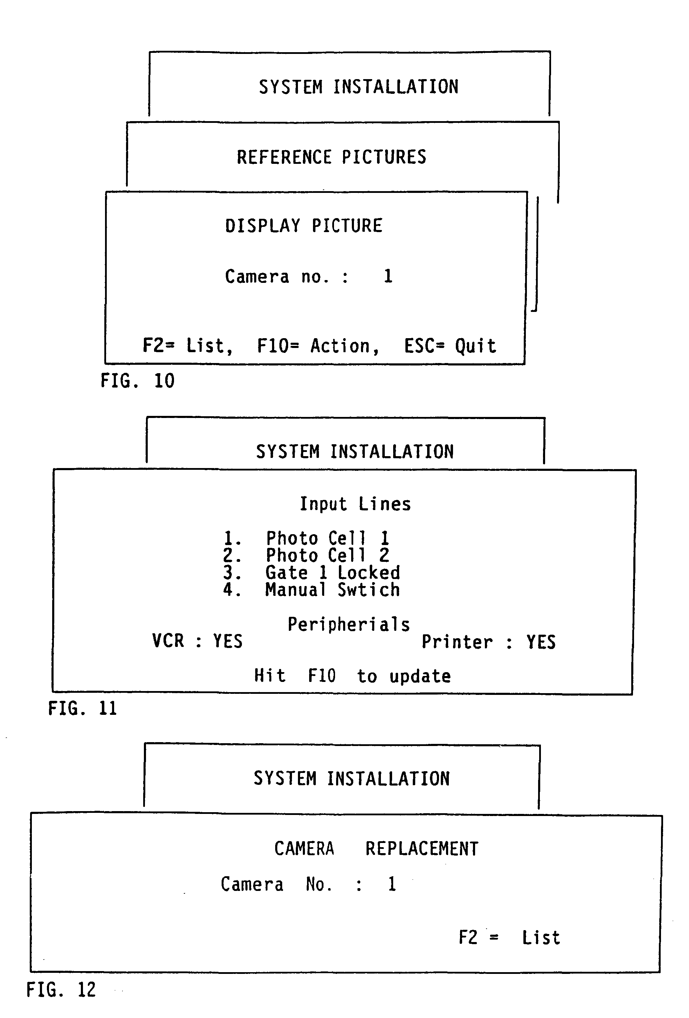

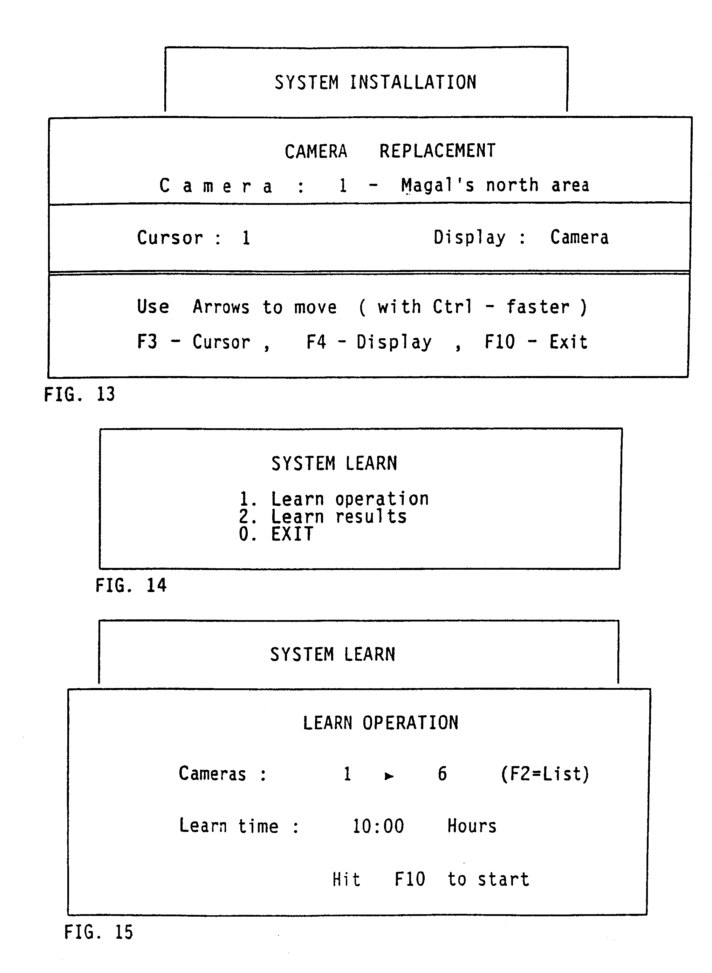

In option 5 of Fig. 2, as shown in Fig. 6, one reference scene per camera is grabbed and stored in the memory of CPU 23. These reference scenes are employed when a camera is replaced, as explained in detail herein with reference to Figs. 12 and 13.

In option 1 of Fig. 6, the user can view a video representation of the scene presently viewed by a selected camera, on screen 20 of Fig. 1. In option 2 of Fig. 6, a single still representation of a scene viewed by a selected camera is grabbed and stored in the memory of CPU 23. In option 3 of Fig. 6, a single still representation of each of the scenes viewed by each of the cameras is grabbed and all of these still representations are stored in the memory of CPU 23. In option 4 of Fig. 6, the grabbed and stored image for a selected camera may be viewed.

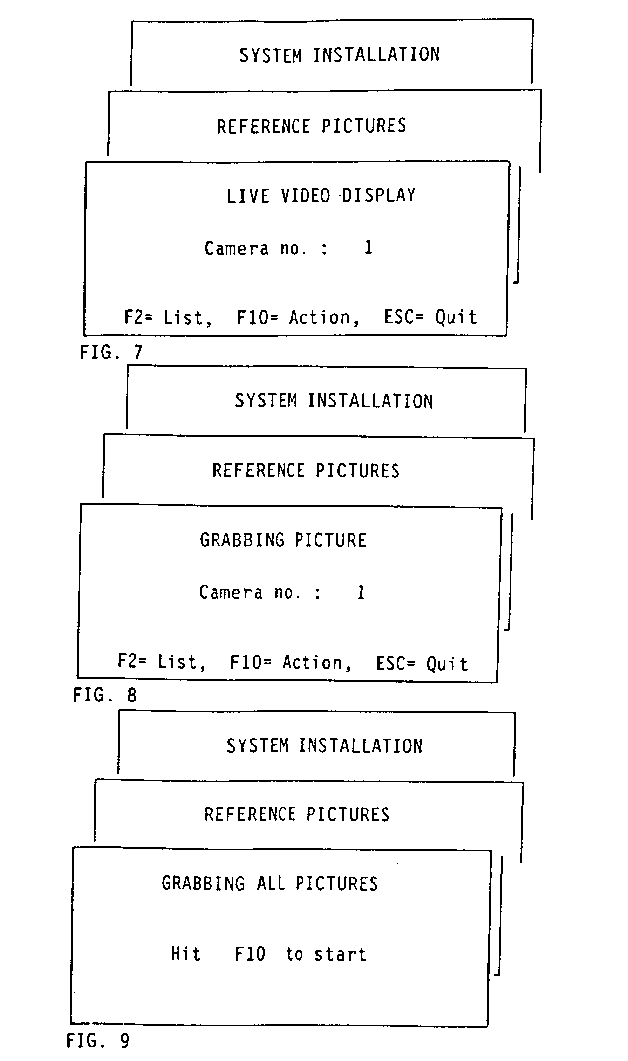

Control screens displayed in response to selection of options 1 - 4 of Fig. 6 are illustrated in Figs. 7 - 10, respectively.

In option 6 of Fig. 2, as shown in Fig. 11, four one-bit digital input lines to the first interface card 28 are named. The four digital input lines determine internal system parameter sets. In the illustrated example, the digital input lines are named Photocell1, Photocell2, Gate1Locked and ManualSwitch, respectively. The names of the digital input lines are preferably selected to be indicative of site characteristic sensing devices associated therewith, such as photocells sensing lighting conditions at the site, or such as a mechanical device indicating whether or not a gate to the site is locked, or such as a manually operated switch which may be employed by a human operator at the site to indicate a particular present condition at the site or a particular instruction to the system.

Option 7 of Fig. 2, as shown in Figs. 12 and 13, may be employed to align a new camera which is replacing a retiring camera. In the control screen of Fig. 12, the user is prompted to indicate which of cameras 24 has been retired. At this point, screen 20 displays the scene presently viewed by the new camera. Superimposed thereupon are two cursors. This scene is useful for alignment of the new camera because it can be compared to the previously stored scene viewed by the retired camera, as explained above with reference to Fig. 6.

In the control screen of Fig. 13, the following options may be selected:

Using option F3, a cursor from among the two cursors which is to be moved, may be selected.

Using the arrow keys on keyboard 22, the cursor selected in option F3 may be positioned on a "landmark" location within the scene displayed on screen 20.

Using toggled option F4, the display of screen 20 may be alternated between the scene viewed by the retired camera, as stored in CPU 23, and between the scene currently viewed by the new camera.

Fig. 14 is an illustration of a control screen display generated in response to a user's selection of option 2 on the control screen of Fig. 1B. As explained above, option 2 relates to identifying motion locations which are relatively unsuitable for inclusion within the "area of interest" to be monitored.

Using option 1 of Fig. 14, as illustrated in Fig. 15, the user selects the camera or cameras 24 which will participate in the learning process and selects a length of time during which the cameras selected monitor their fields of view for motion. The learning process is initiated, in the illustrated embodiment, using key F10. The learning process, which is sometimes lengthy, can preferably be interrupted by the user, as by pressing the Escape key on keyboard 22.

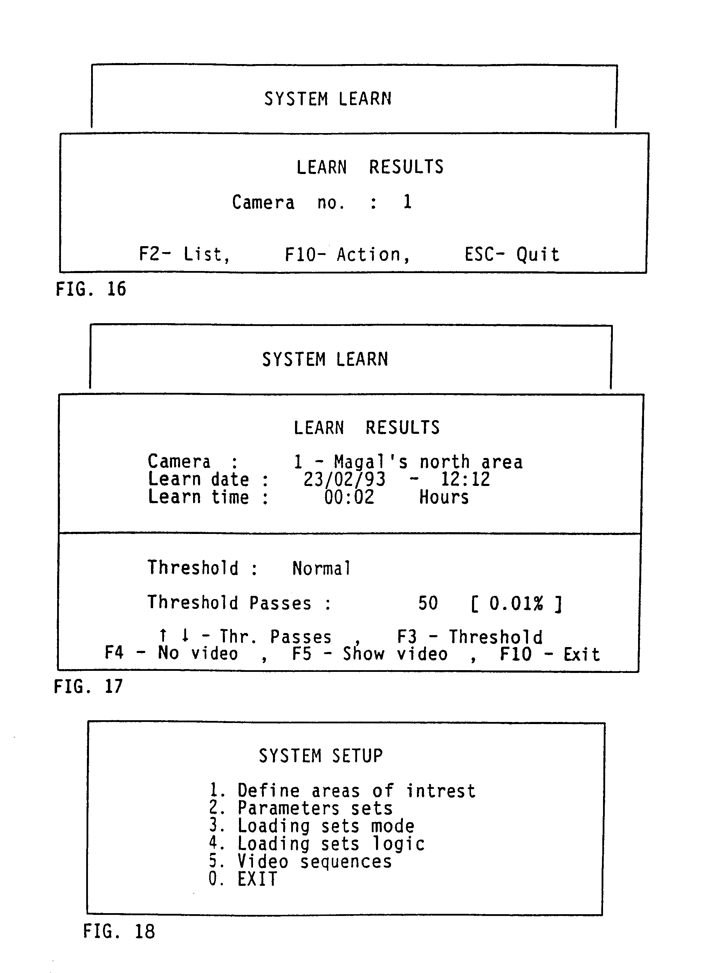

Using option 2 of Fig. 14, as illustrated in Fig. 16, a camera is selected from among the cameras 24 participating in the learning process, and in response, the learning results for the selected camera are displayed on screen 20 and the display of Fig. 17 is displayed on screen 21. The display of learning results provided on screen 20 preferably includes the scene viewed by the selected camera and, superimposed thereupon, indications of "motion locations" such as a box superimposed onto each motion location. A "motion location" is a location at which motion occurred during at least a user-selected percentage of the learning time. "Motion" refers to a change in gray level intensity of at least a user-selected magnitude.

The top half of the display of Fig. 17 includes a summary of the learning results. Using the bottom half of the display of Fig. 17, the parameters of the above-described definition of motion may be modified. In the illustrated example, the current definition of motion is as follows:

Threshold = Minimum magnitude of gray level intensity change which is considered an occurrence of motion: Normal.

Threshold passes = Minimum percentage of learning time which, if exceeded by the percentage of time during which motion occurs at a particular location, qualifies that location within the field of view of the camera as a "motion location": 50 x 0.01.

The definition of motion may be modified, in the illustrated example, as follows:

F3 key: modifies Threshold. For example, in response to pressing F3, a menu of 9 possible threshold values may appear and the user may be prompted to select a new threshold value.

Up/down Arrow keys: Increments/decrements the value of Threshold Passes until a desired value of between 1 x 0.01 and 99 x 0.01 is displayed.

The display of the viewed scene on screen 20 may be modified as follows:

Pressing F4 on keyboard 22 results in a display of motion location indications only, without the scene.

Pressing F5 on keyboard 22 results in a display of the scene only, without motion location indications.

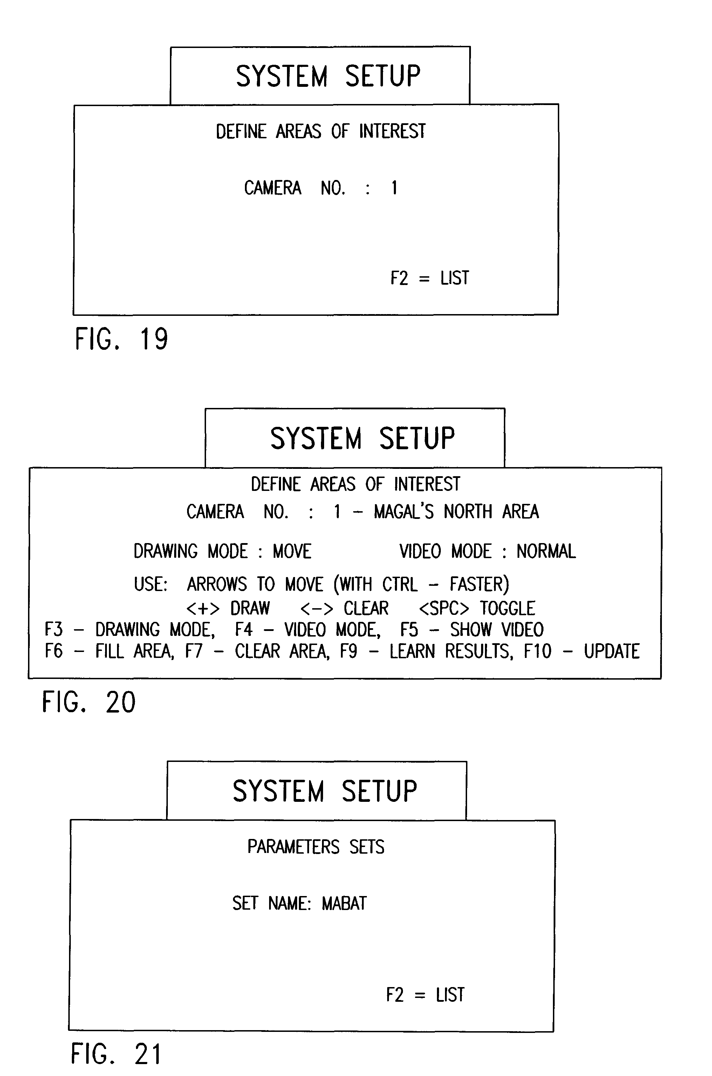

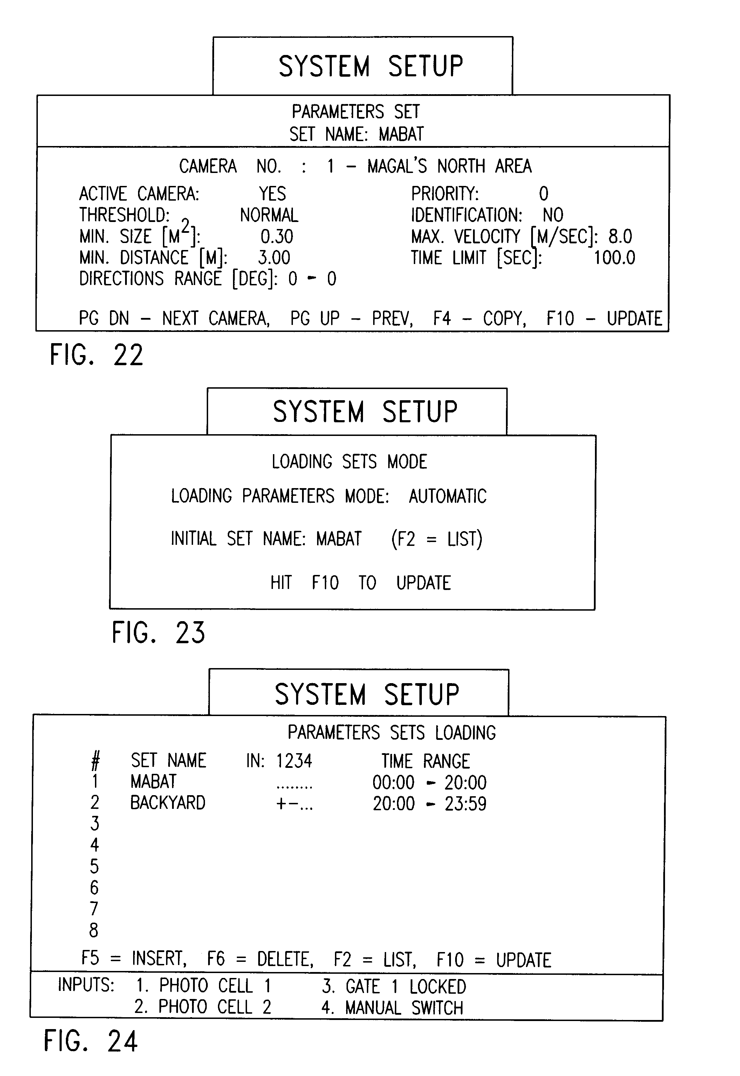

Fig. 18 is an illustration of a control screen display generated in response to a user's selection of option 3 on the control screen of Fig. 1B. Option 3 pertains to setting up the system. In option 1 of Fig. 18, as shown in Figs. 19 and 20, the area of interest is defined. In option 2, as shown in Figs. 21 and 22, camera parameters are defined for each of the cameras to which the system is connected. The term "parameter set" here refers to a set of values for each a plurality of camera parameters characterizing each camera. Preferably, more than one parameter set can be stored. Switching between parameter sets may be, selectably, either manual or automatic. The user can preferably select criteria for automatic switching between parameter sets. These criteria may include switching as a result of external input provided via the input lines to interface cards 28 and/or in accordance with a user-selected timing schedule.

In option 3 of Fig. 18, as shown in Fig. 23, the user indicates whether switching between parameter sets is to occur in response to a manual input or in response to automatic criteria. Also, the name of an initial parameter set is selected.

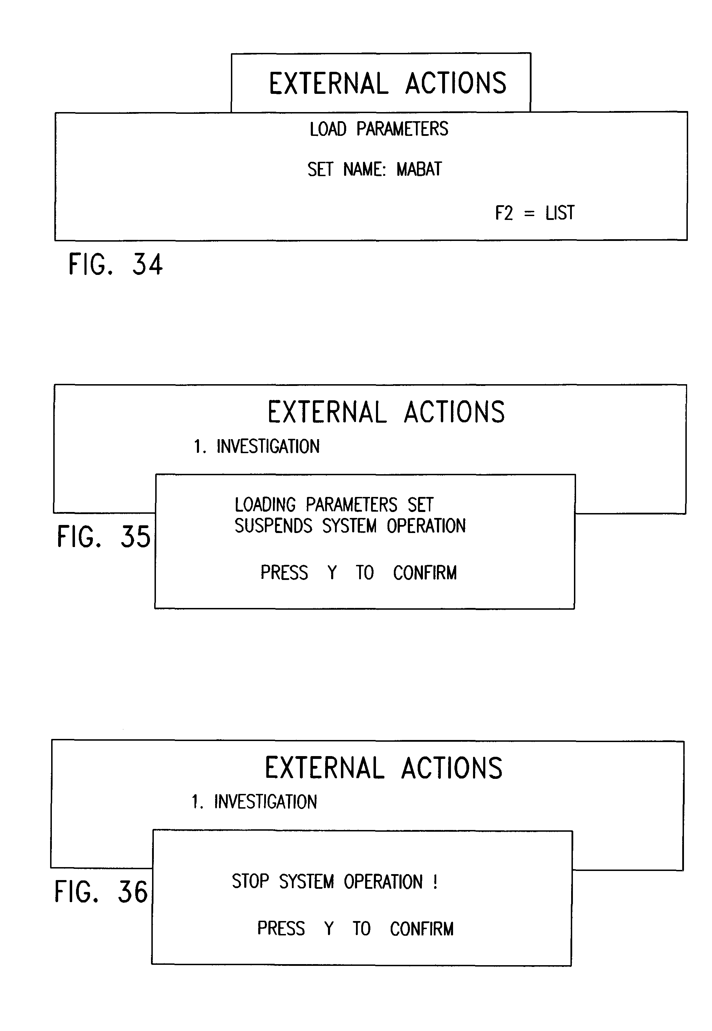

If switching is in response to manual criteria, the manual criteria are defined as described below with reference to Figs. 34 and 35.

If switching is in response to automatic criteria, the automatic criteria are defined by employing option 4, as shown in Fig. 24.

Each row of the display of Fig. 24 pertains to an individual parameter set as defined by option 2 of Fig. 18. In the illustrated example, two parameter sets, named MABAT and BACKYARD, have been defined by option 2 of Fig. 18. For each parameter set, positions of the four input lines to interface cards 28 are selected and these positions are necessary conditions for activation of that parameter set. If there is no necessary condition regarding the position of a particular input line, this may be indicated by a ".". In the illustrated example, there are no conditions attached to the four input lines corresponding to the MABAT parameter set. There are also no conditions attached to input lines III and IV corresponding to the BACKYARD parameter set. A necessary condition for activation of the BACKYARD parameter set is that the positions of input lines I and II are + and -, respectively.

Also, for each parameter set, a timing interval is selected and a necessary condition for activation of each individual parameter set is that the current time is included in the timing interval of the individual parameter set. For example, the MABAT parameter set will not be activated between 20:00 and 0:00 because the condition of having the current time between 0:00 and 20:00 is a necessary condition for activating the MABAT parameter set.

Activation of the parameter sets is preferably in accordance with priorities defined therebetween, such that parameter sets lower down on the list are of lower priority. In other words, the system continuously checks the input line positions and time interval for each parameter set and replaces the current parameter set with the first parameter set for which the input line positions and time interval both indicate that the parameter set should be activated. If no such parameter set is found, the current parameter set is maintained.

Reference is now made back to Figs. 19 - 22. Fig. 19 shows the first step for defining areas of interest, namely selection of a camera for which it is desired to define an area of interest. The area of interest for the selected camera is defined using the screen of Fig. 20. The screen of Fig. 20 provides drawing tools which are merely exemplary of drawing tools which may alternatively be provided. The screen of Fig. 20 also enables the user to press F9 in order to view motion locations within the field of view of the camera, which motion locations were identified in the course of the system's learning process, as explained in detail herein with reference to Fig. 17.

Figs. 21 and 22 relate to the parameter setting option 2 of Fig. 18. In Fig. 21, the name of a parameter set is selected. In Fig. 22, values are assigned to each parameter within the selected parameter set. The parameters preferably include:
a. Active camera: whether the camera is active;
b. Threshold: as defined above.
c. Minimum size: the minimum size of entity which is considered a candidate intruder;
d. Minimum distance: the minimum distance, along a risk direction, which, once covered by an entity, causes the entity to be considered a moving entity;
e. Directions range: The azimuth of risk directions, i.e. the set of directions which, when moved along, cause the system to monitor for possible intrusion.
f. Priority: A value typically between 0 and 9 which indicates the relative priority for display of a scene captured by the present camera, in an instance where the present camera and at least one additional camera provide simultaneous alarms.
g. Identification: Whether or not the human-identification option is operative.
h. Maximum velocity: The maximum velocity of an entity for which the entity is still considered a moving entity. The purpose of this parameter is, for example, to eliminate false alarms as a result of birds.
i. Time limit: The maximum amount of time for which an entity can pause without causing the accumulation of distance traveled along a risk direction to be zeroed.

Fig. 25 is a screen display appearing in response to selection of option 5 of the screen of Fig. 18. In option 5, a video sequence is defined, according to which the scenes viewed by each of the active cameras 24 are sequentially displayed on screen 20 of Fig. 1A. In Fig. 25, the sequence of cameras is defined as well as the amount of time for which the scene viewed by each camera is displayed.

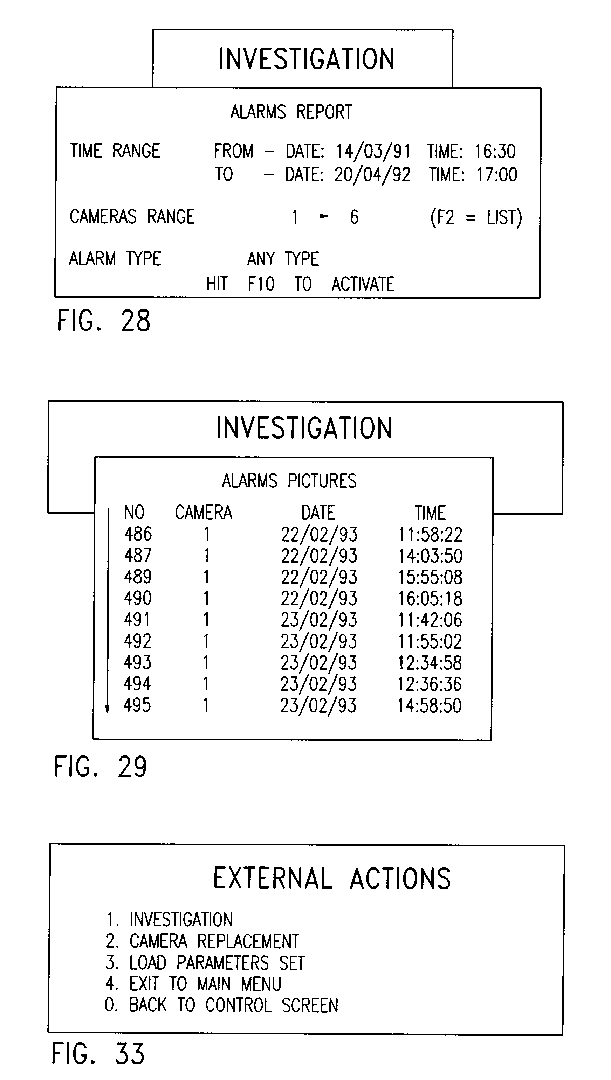

Fig. 26 is a screen display appearing in response to option 5 of the screen of Fig. 1B. Option 5 is an investigation option, i.e. it provides a supervisor with a summary of events during a selected time period. In the illustrated embodiment, the summary of events comprises a printout generated by printer 27 of Fig. 1A. In Fig. 26, the supervisor selects the type of summary he wishes to view. An "events" report includes all events, i.e. not only alarms but also non-alarm events including actions of the human operator such as silencing the alarm buzzer. In the screen of Fig. 27, the supervisor designates a time period over which the events report is desired. In Fig. 28, the supervisor designates a time period over which an alarm report is desired, designates the cameras to which the alarm report should pertain, and designates the type of alarm to which the alarm report should pertain, such as motion detection alarm, obstructed camera alarm, video failure alarm, and "all types of alarms".

Fig. 29 pertains to option 3 of Fig. 26. According to this option, a list of alarms, including, for each alarm, the camera which alarmed and the date and time of occurrence of the alarm, is displayed. Preferably, a still picture of the scene when the alarm occurred is stored in the memory of CPU 23 and can be accessed by selecting a scene, using the screen of Fig. 29.

Reference is now made to Figs. 30A and 30B which are screens displayed on monitor 20 of Fig. 1A at two different times, in the course of an alarm event. In Fig. 30A, a putative intruder was first detected at point 30 and is tracked, as indicated by the heavy black trajectory line 32, to his present location as indicated by a heavy black square 36. In Fig. 30B, the intruder has advanced, as indicated by the longer trajectory line 32 and the new location of heavy black square 36.

Preferably, an indication of one or more of the following items of information are superimposed onto the image of the scene: camera ID, camera name, which is typically indicative of the camera's location within the site to be protected, date, time.

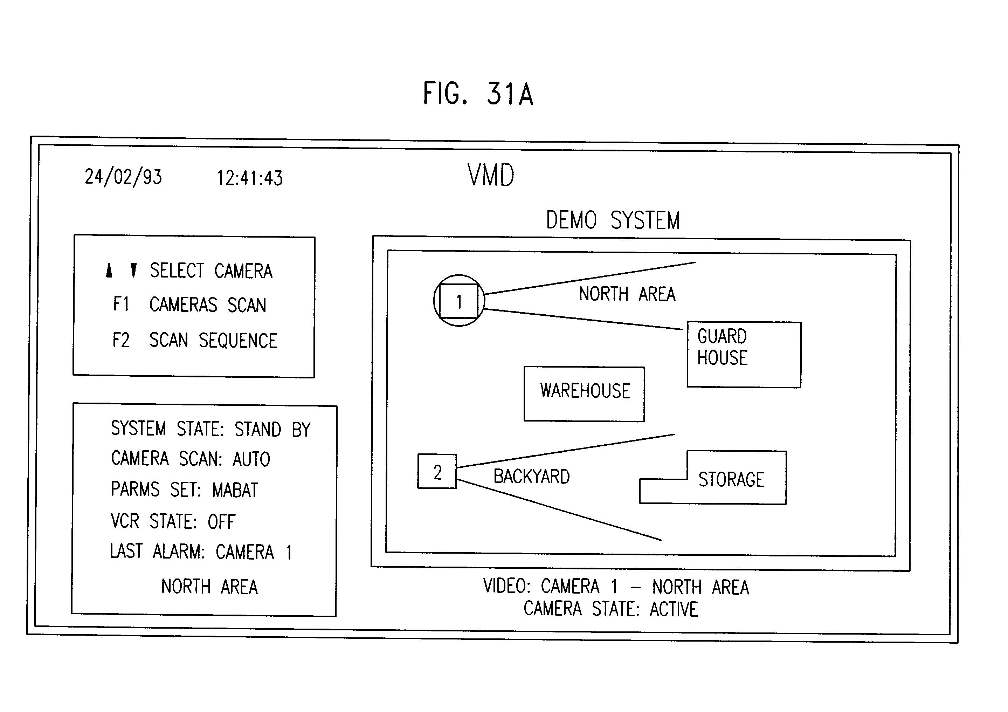

Fig. 31A-E are illustrations of control screen displays generated in response to a user's selection of option 4 on the control screen of Fig. 1B, each of which includes a map of the site to be protected.

Fig. 31A is an illustration of a control screen display appearing in the course of normal operation of the system. The user can decide whether selection of the image viewed on the screen 20 is in accordance with manual user input (key F1; indication of individual cameras by means of arrows), or in accordance with a user-defined camera sequence, as described above with reference to Fig. 25.

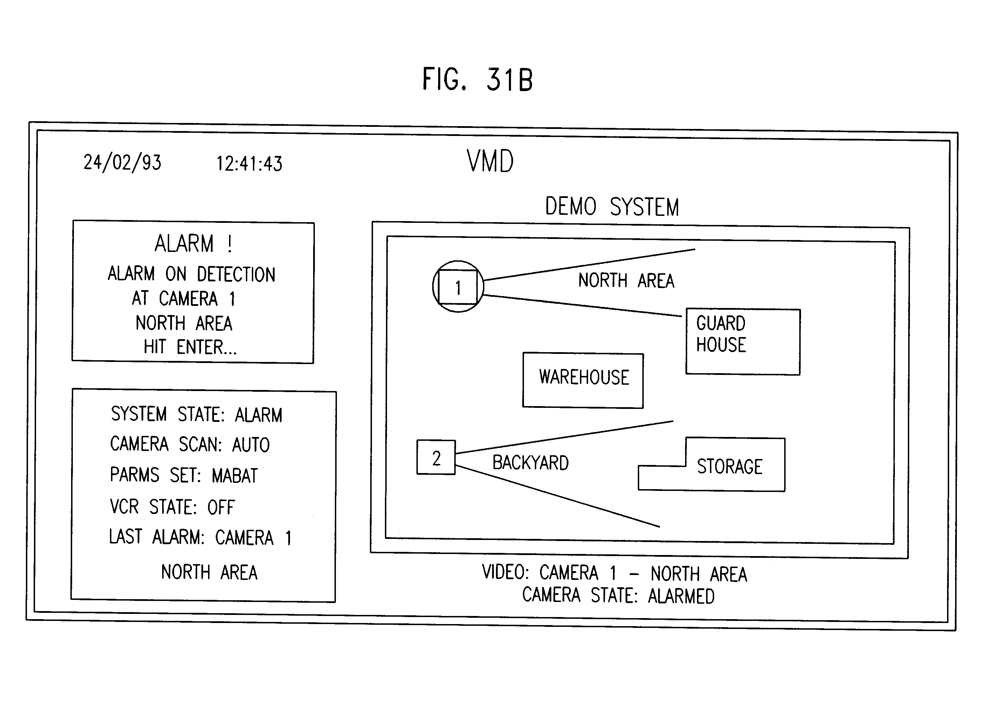

Fig. 31B is a control screen appearing in the course of an occurrence of an alarm within the scene viewed by one of the cameras 24 of Fig. 1. The alarming camera is typically indicated, for example, it may appear to be red whereas the other cameras may appear in a different color. Appearance of the screen of Fig. 31B is typically accompanied by an audio alarm signal. By pressing ENTER, the user can terminate the audio alarm signal, at which point the control screen of Fig. 31B is replaced by the control screen of 31C.

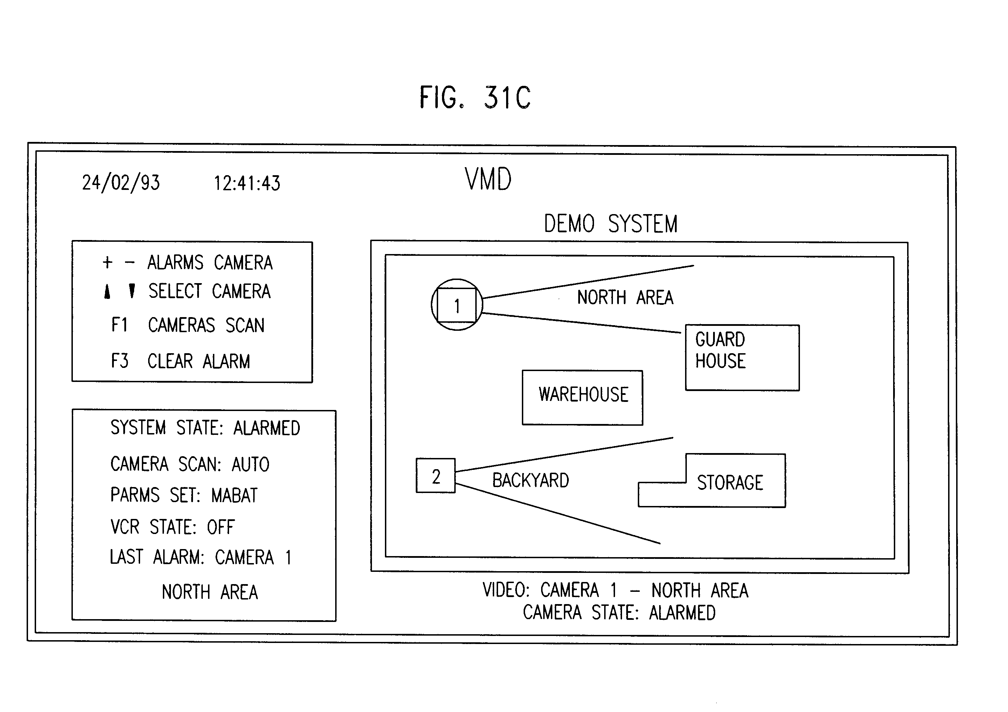

By pressing key F3 of Fig. 31C, the user can terminate the alarm event, at which point the system will re-enter the alarm status if an alarm event recurs in the scene imaged by the same camera.

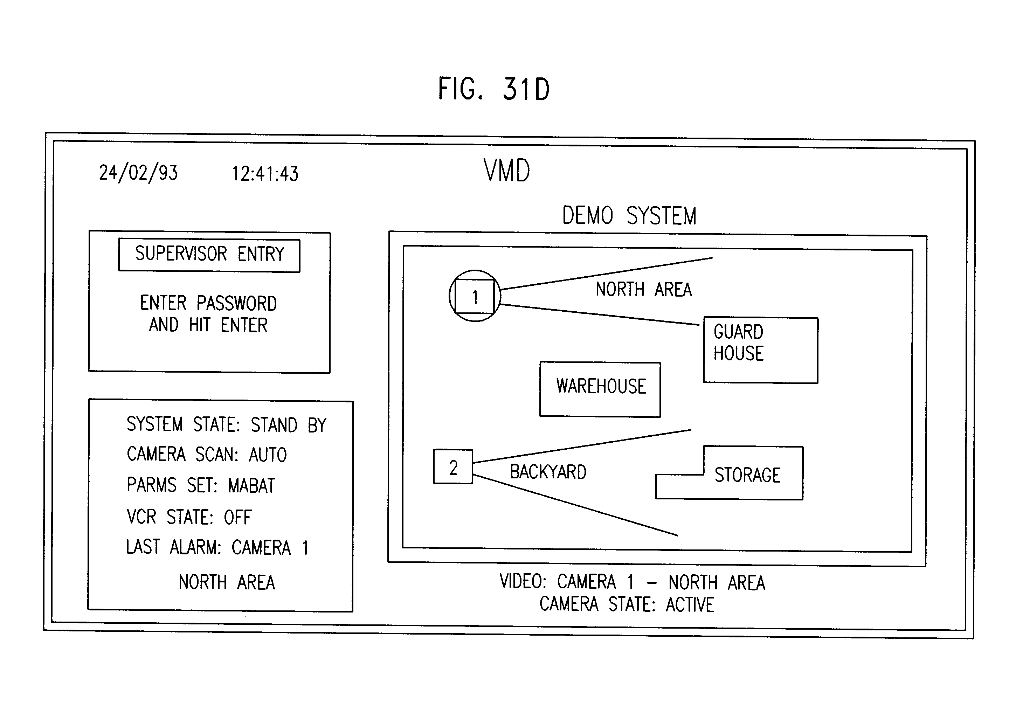

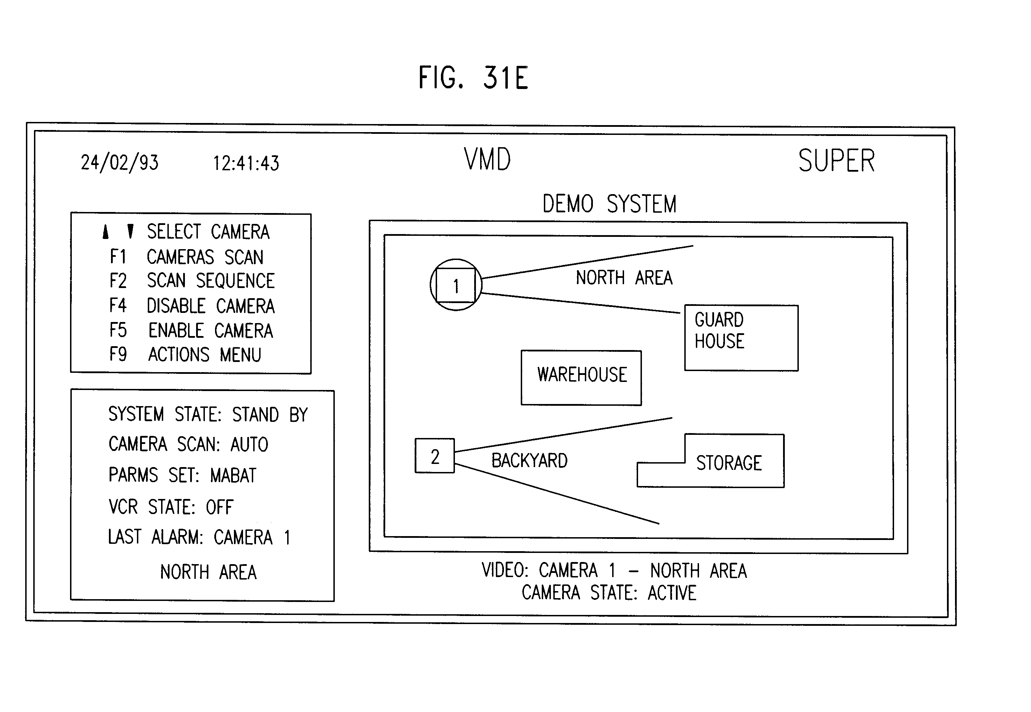

The control screen illustrated in Fig. 31D may be accessed by the supervisor from any other control screen by a suitable indication, such as pressing the ALT and F10 buttons. The supervisor is prompted to enter the system password. If the supervisor successfully enters the system password, the control screen of Fig. 31E is displayed.

Using the screen of Fig. 31E, the supervisor can disable an individual one of cameras 24, may enable a previously disabled one of cameras 24, and may obtain access to the control screen of Fig. 33, as described below with reference to Fig. 33.

Fig. 33 is an illustration of a control screen display generated in response to a user's pressing the option corresponding to key F9 on the screen of Fig. 31E. The system continues to operate while a user, such as a supervisor, views the screen of Fig. 33. Using option 1, the supervisor can gain access to the screen of Fig. 26. Using option 2, the supervisor can gain access to the screen of Fig. 12. Using option 3, the supervisor can gain access to the screen of Fig. 34 and then to the screen of Fig. 35. Using option 4, the supervisor can gain access to the screen of Fig. 36. Using option 5, the supervisor returns to the screen of Fig. 31.

Figs. 34 - 35 are illustrations of sequential control screen displays generated in response to a user's selection of option 3 on the screen of Fig. 33. By interacting with these screen displays, manual criteria for switching between parameter sets, as described above with reference to option 3 of Fig. 18, may be defined.

Fig. 36 is an illustration of a control screen display generated in response to a user's selection of Exit option 4 on the control screen of Fig. 33. Using this screen, the user confirms that it is his intention to exit.

Fig. 37 is a schematic block diagram of the electronic circuitry of the apparatus of Fig. 1A.

It is appreciated that the software components of the present invention may, if desired, be implemented in ROM (read-only memory) form.

It is appreciated that the applicability of the current invention is not limited to motion detection but may include other uses such as highway traffic monitoring and popularity monitoring of entertainment sites such as museums, stores, and amusement facilities.

It is appreciated that only one of or some of the various features shown and described as characterizing the preferred embodiment of the invention need be provided in a system constructed and operative in accordance with the present invention.

It will be appreciated by persons skilled in the art that the present invention is not limited to what has been particularly shown and described hereinabove. Rather, the scope of the present invention is defined only by the claims that follow:

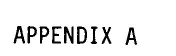

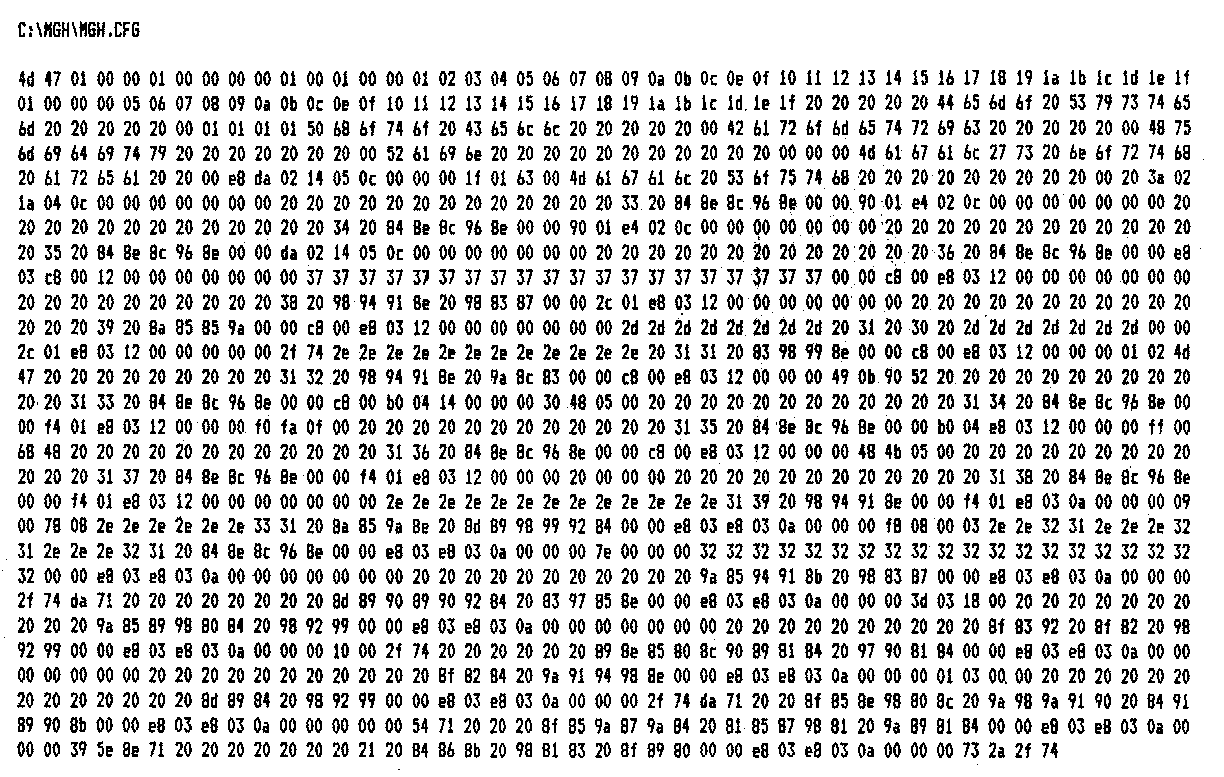

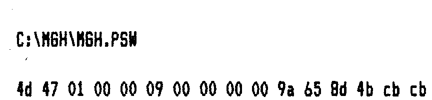

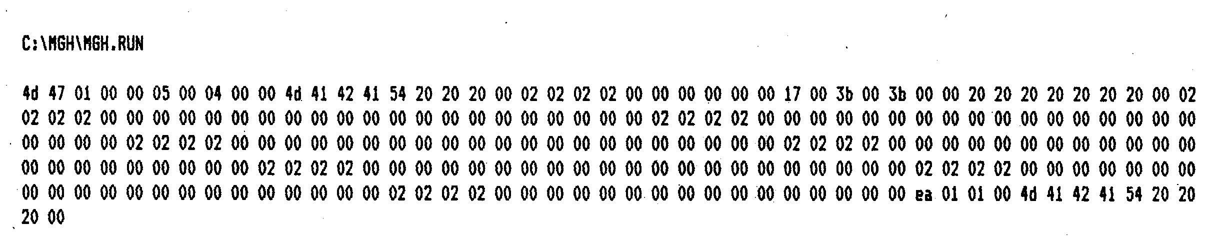

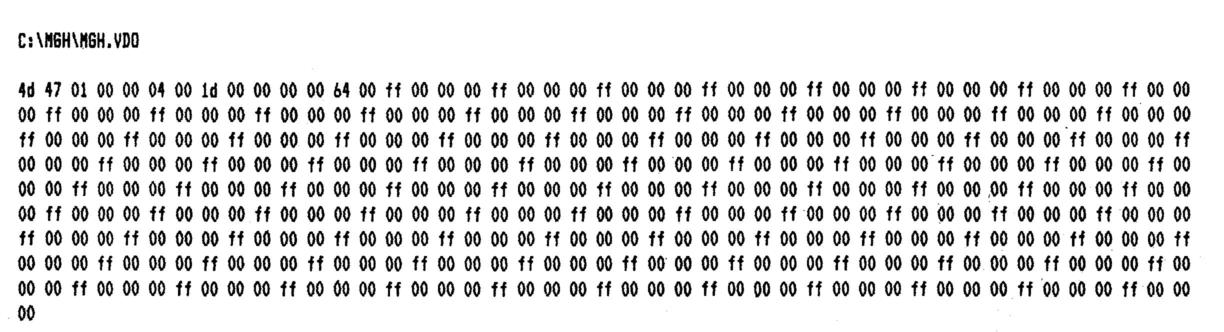

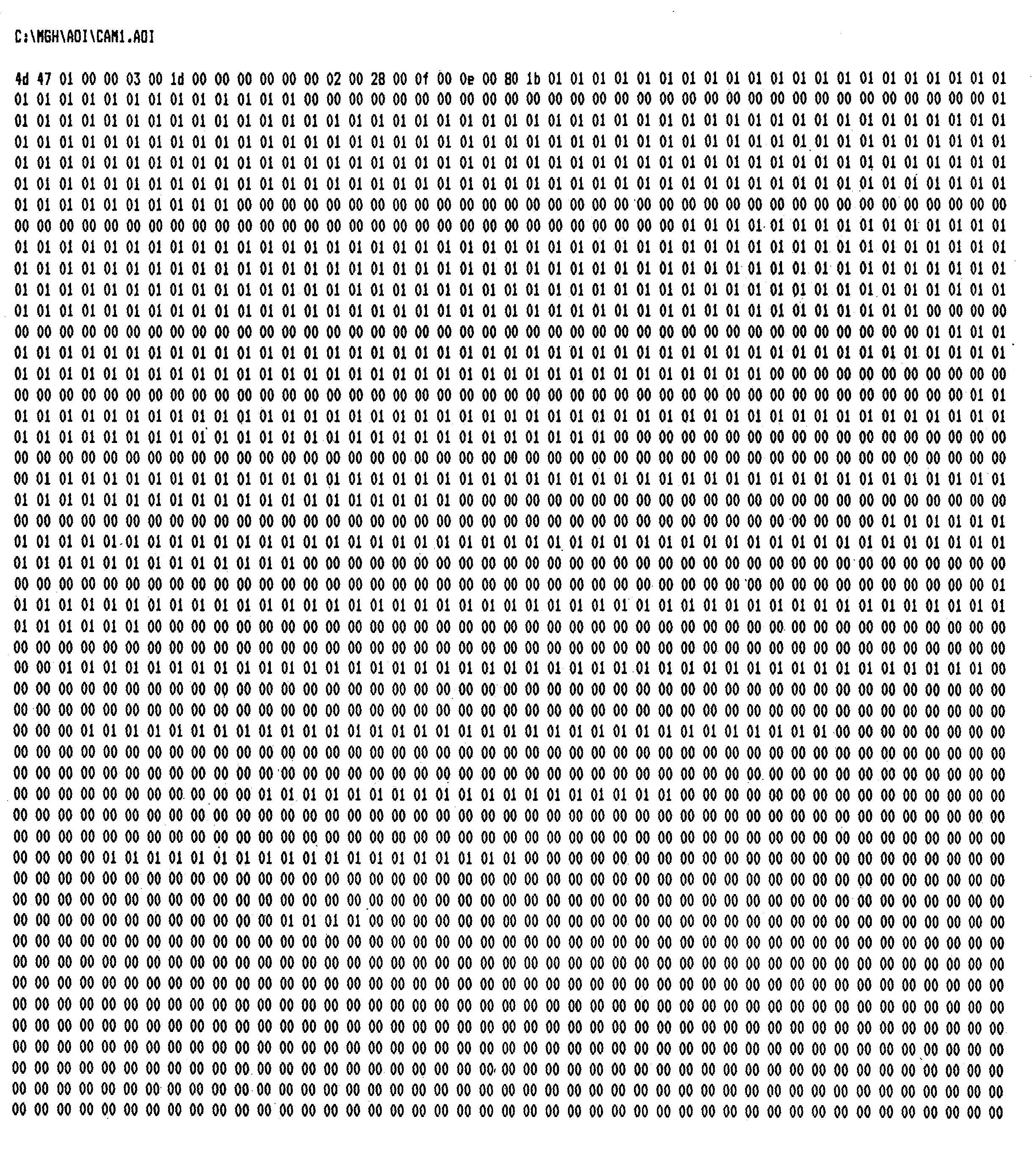

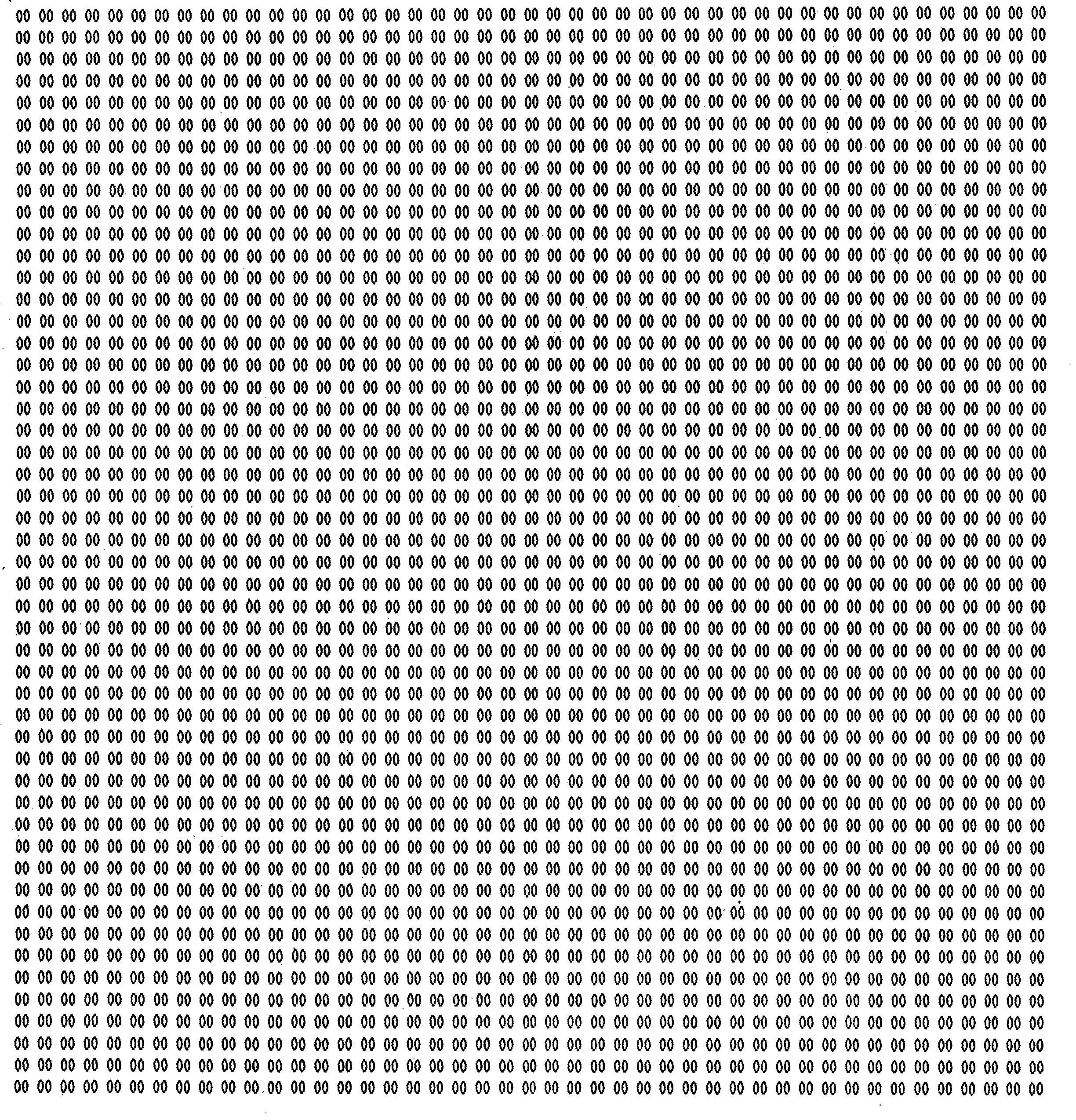

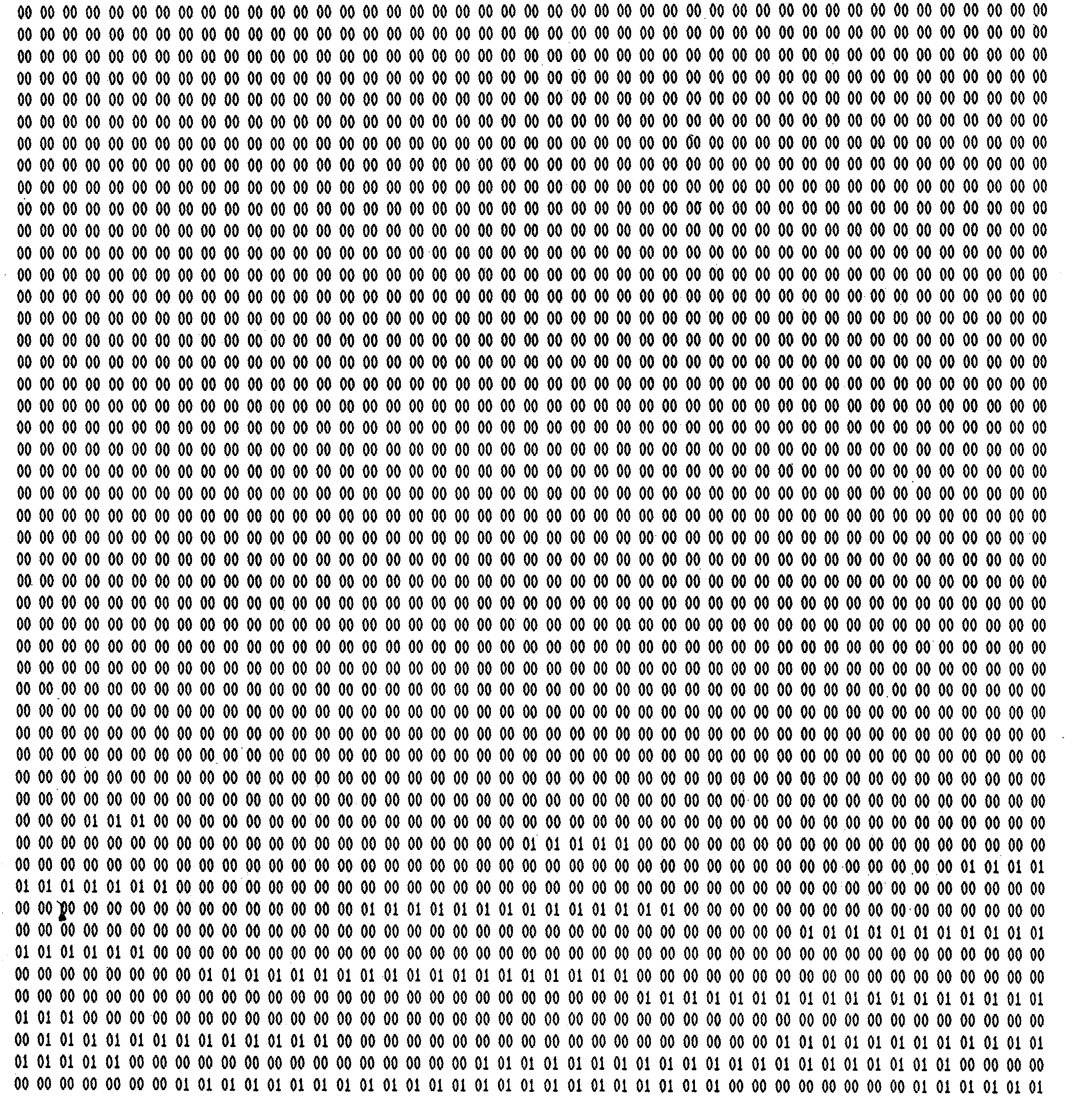

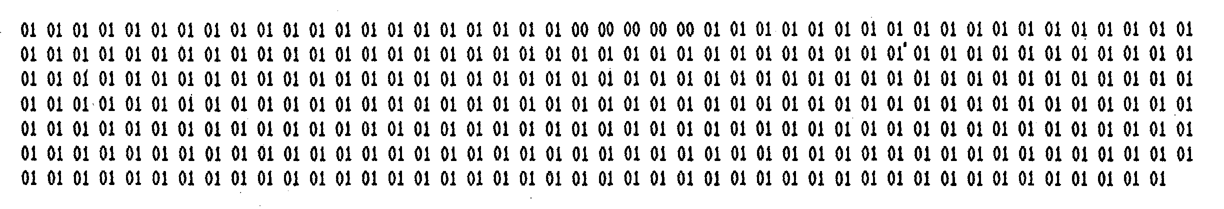

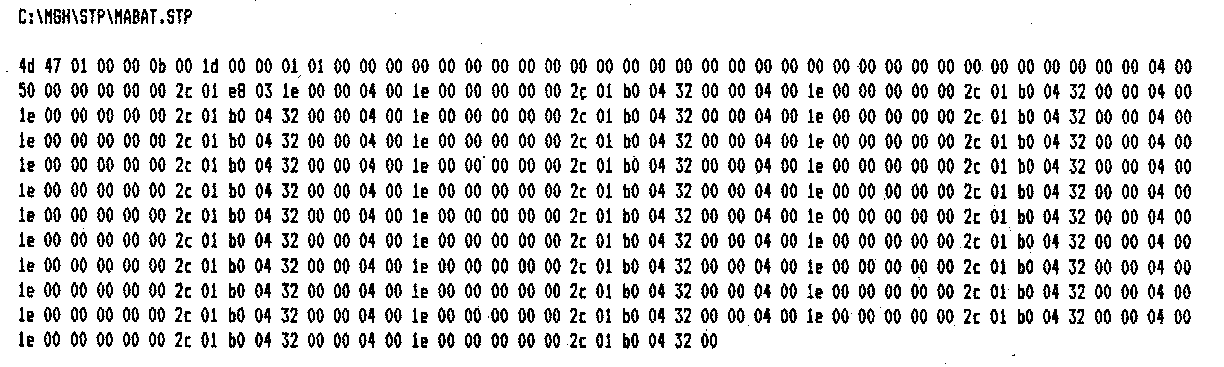

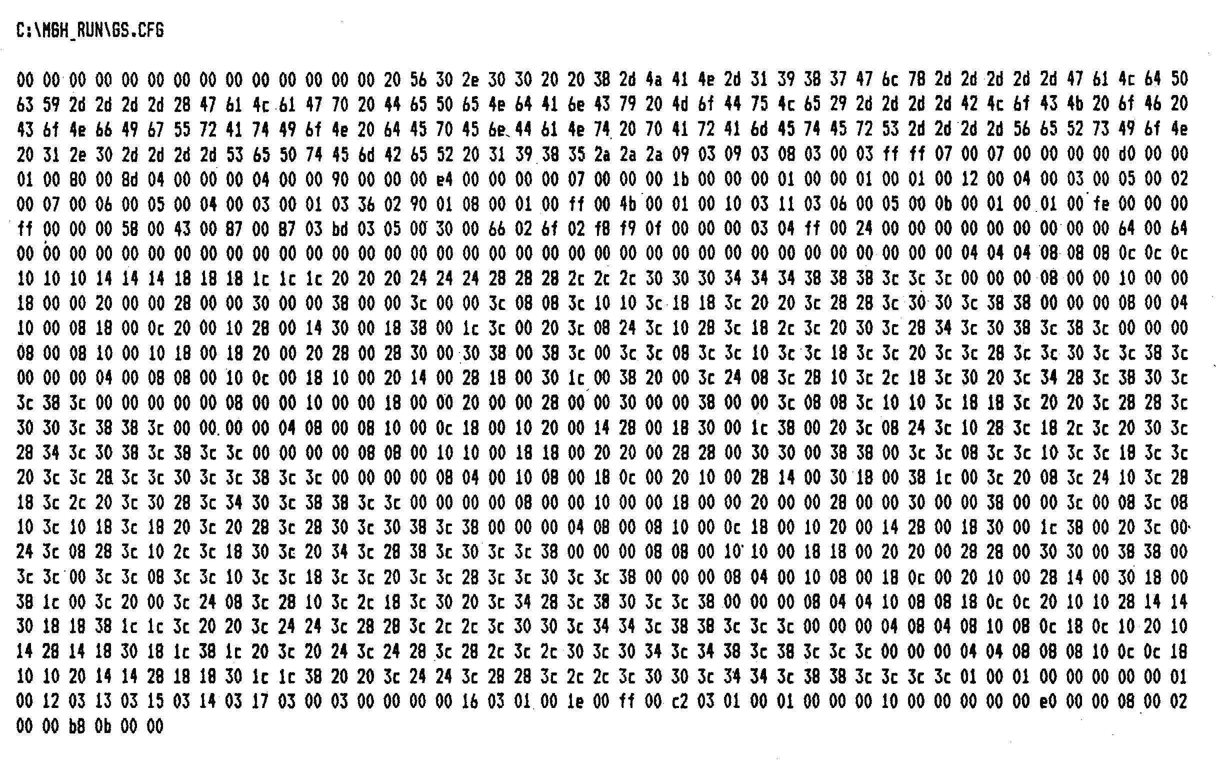

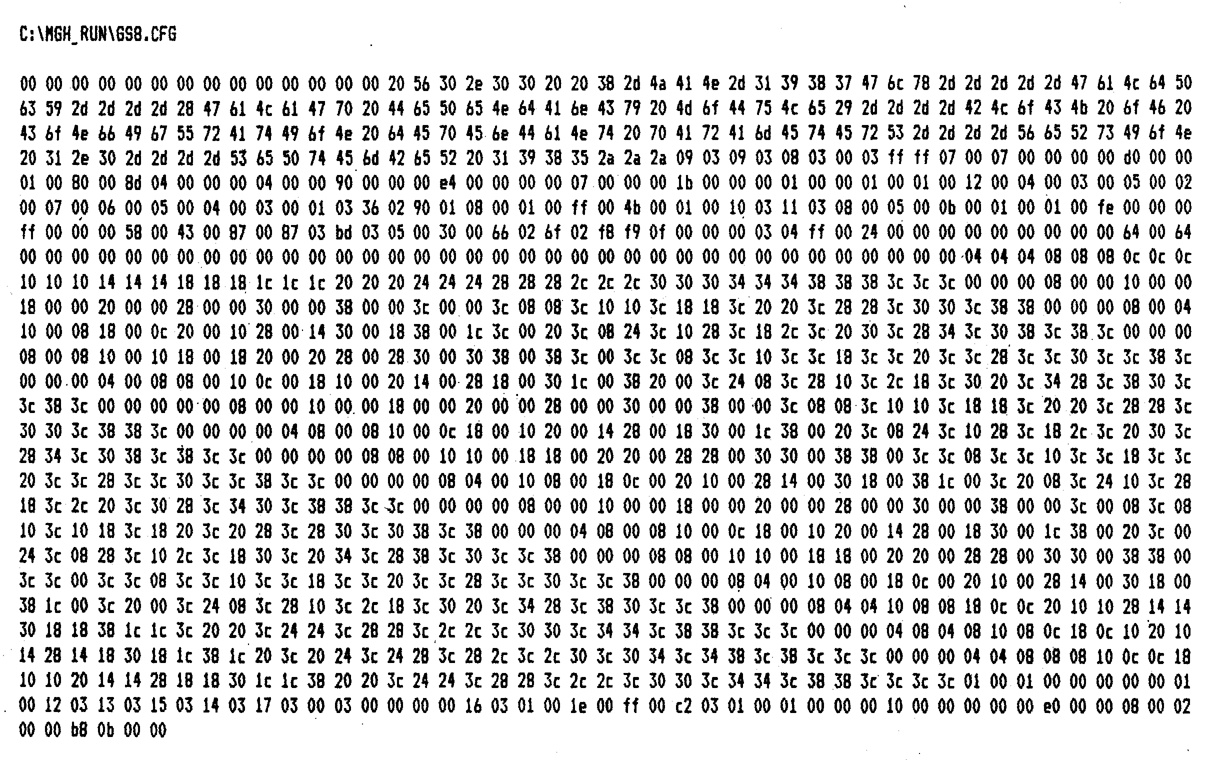

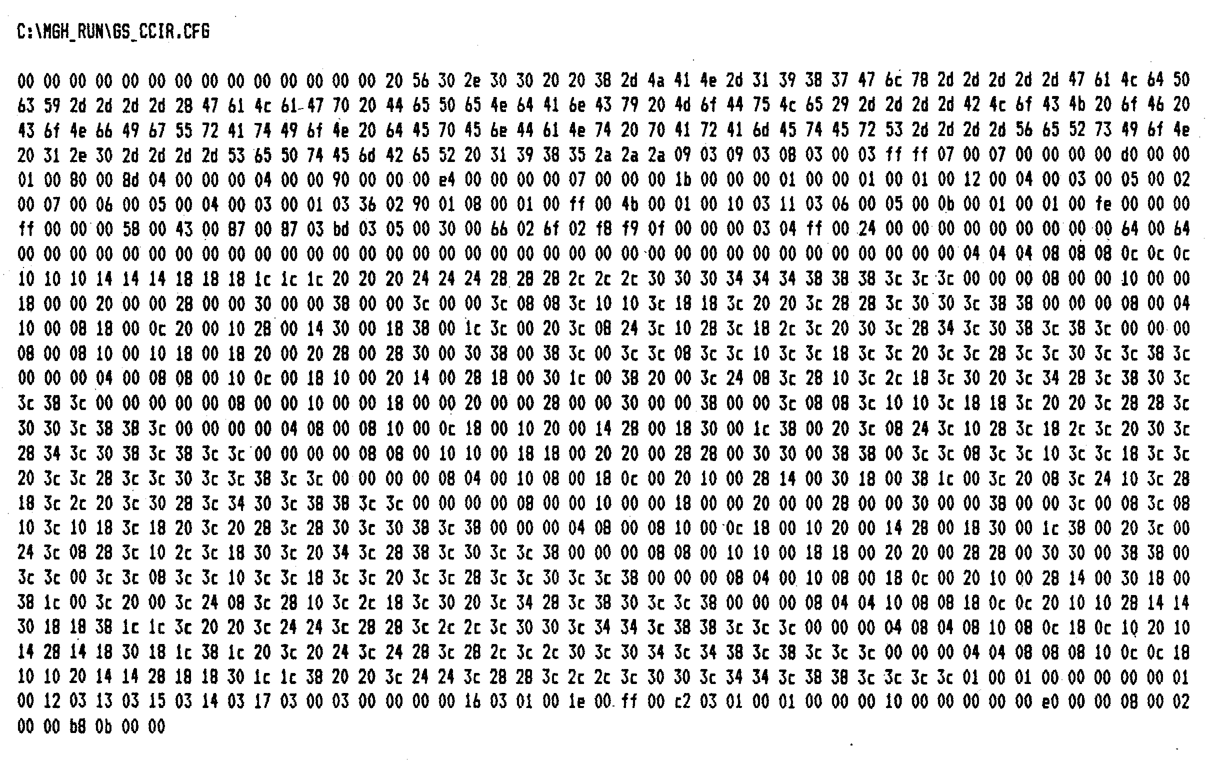

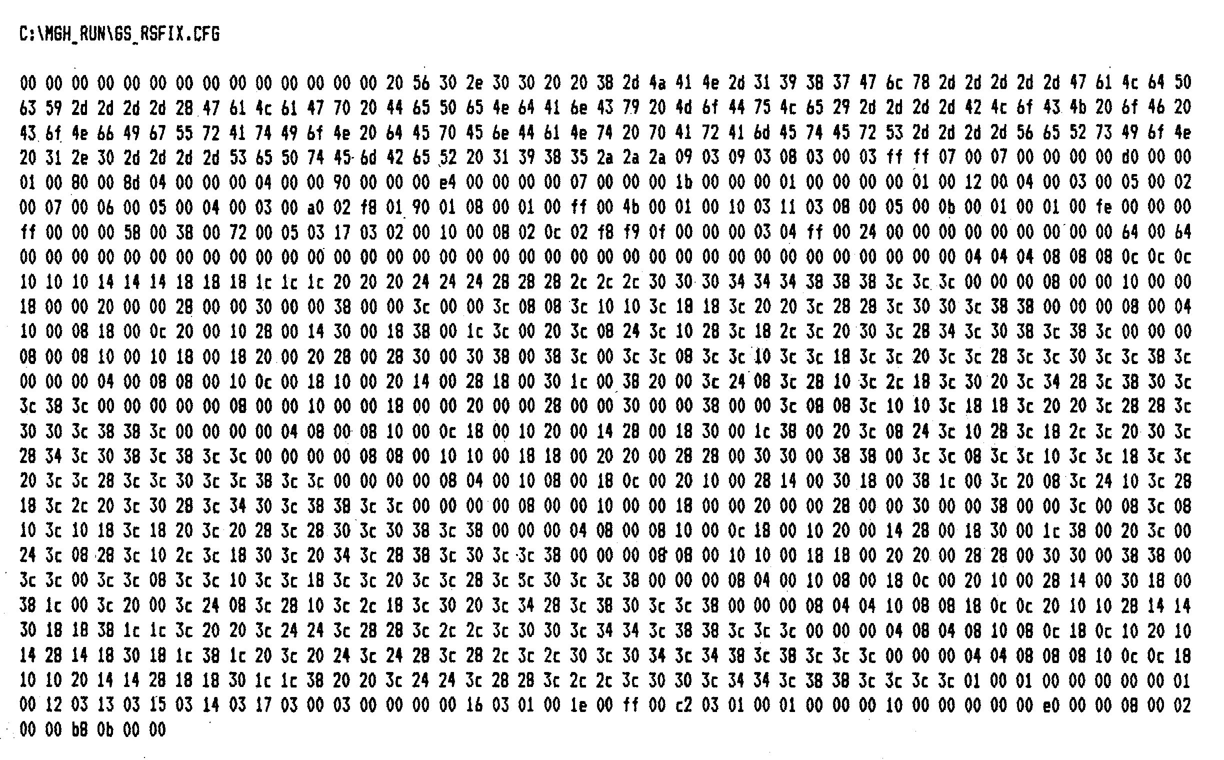

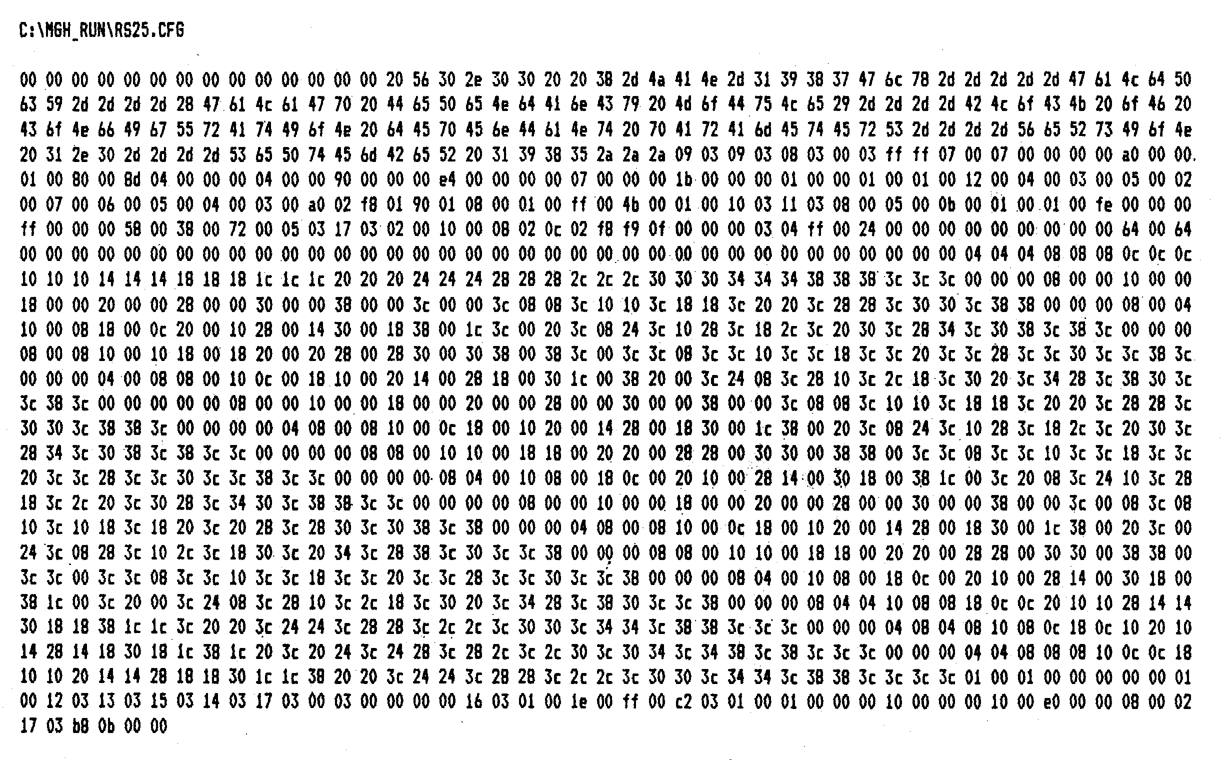

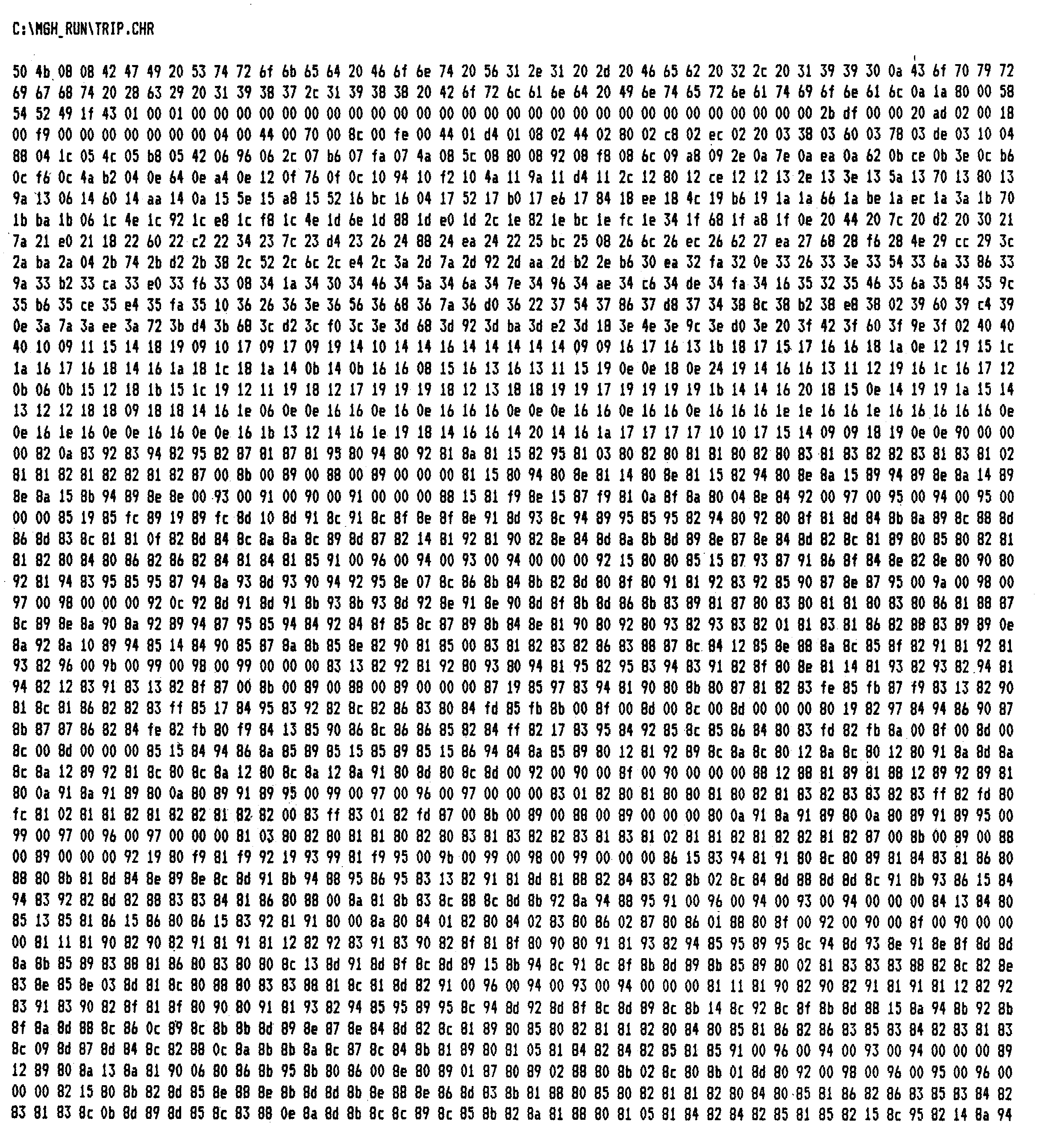

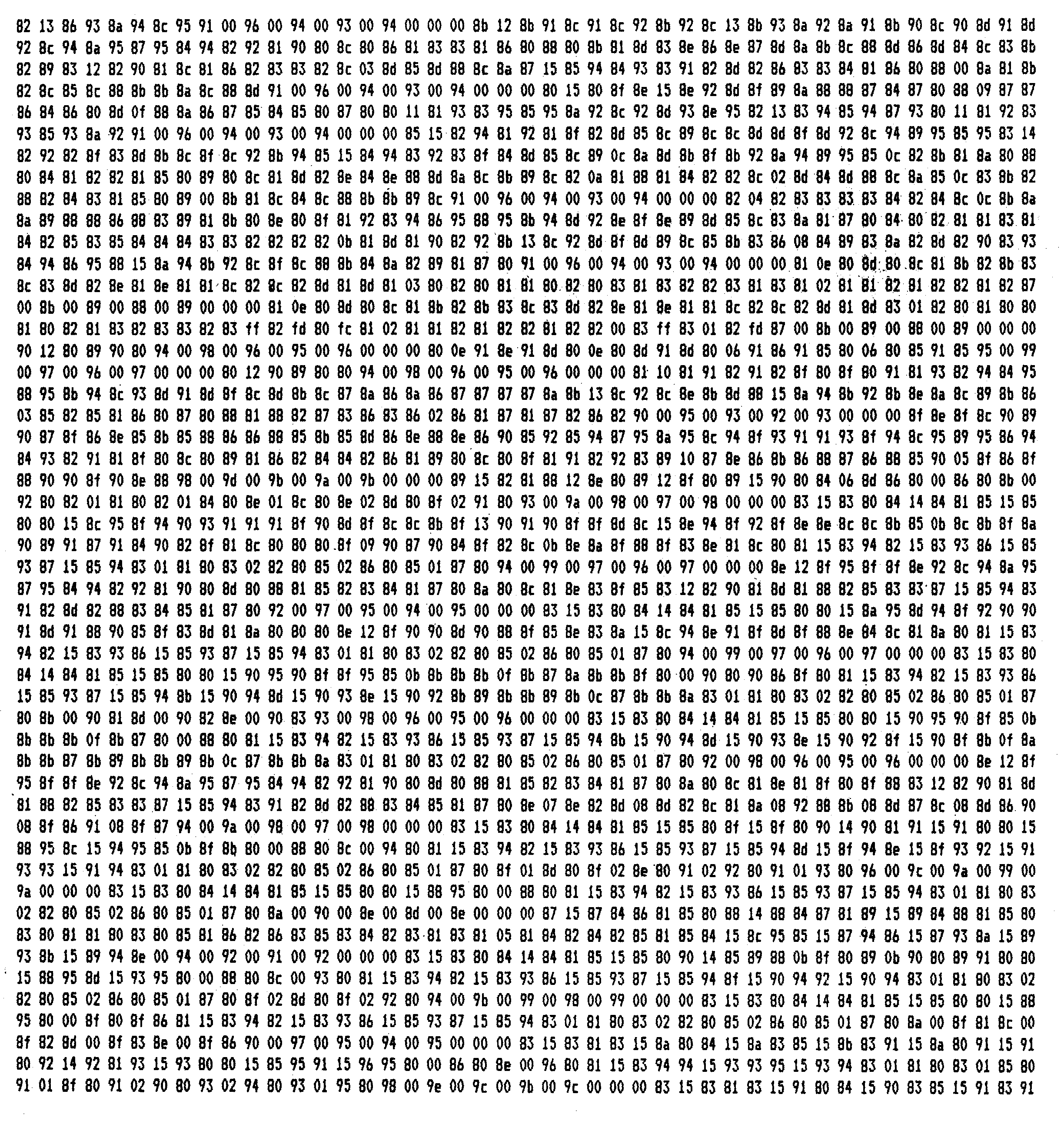

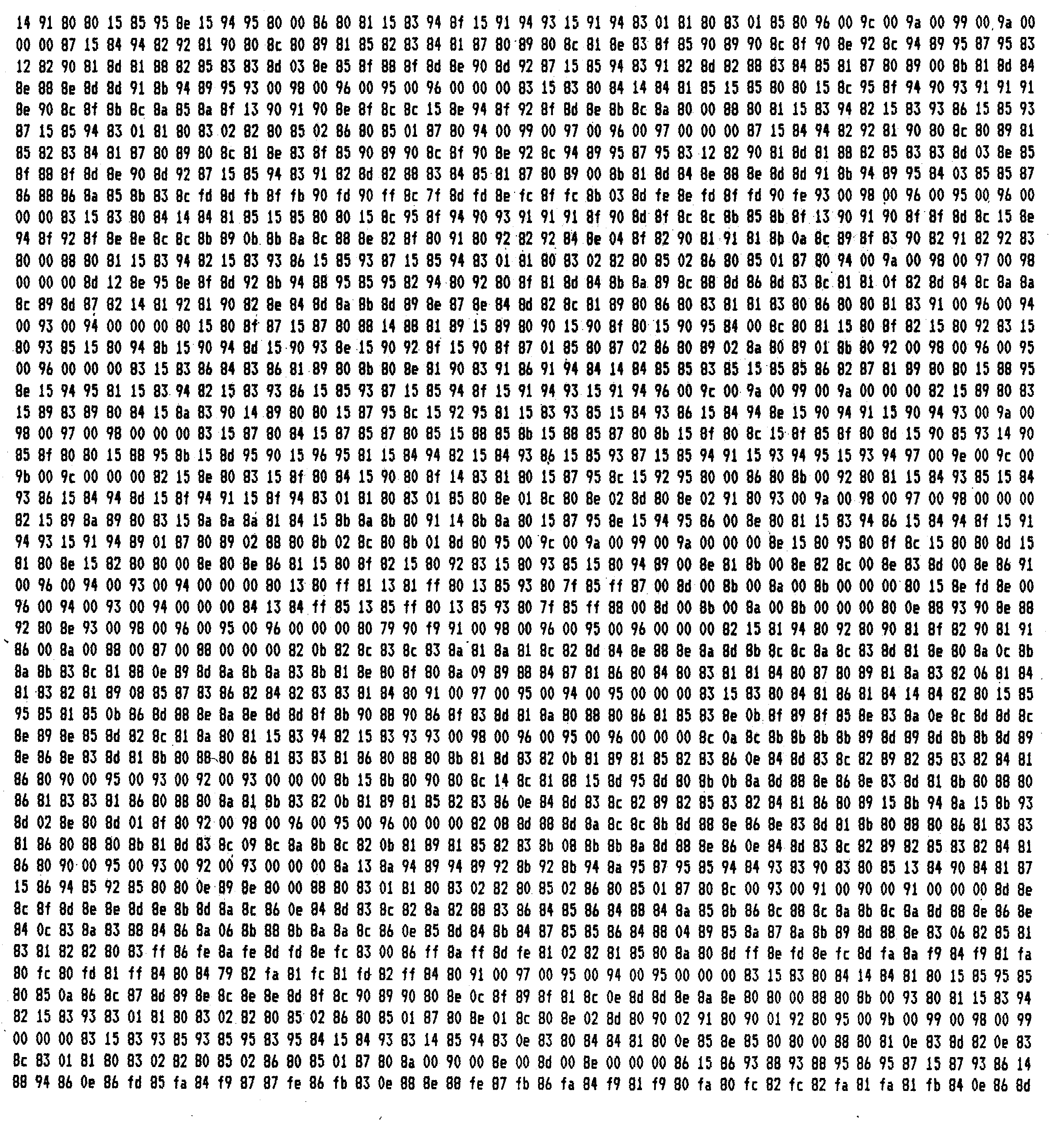

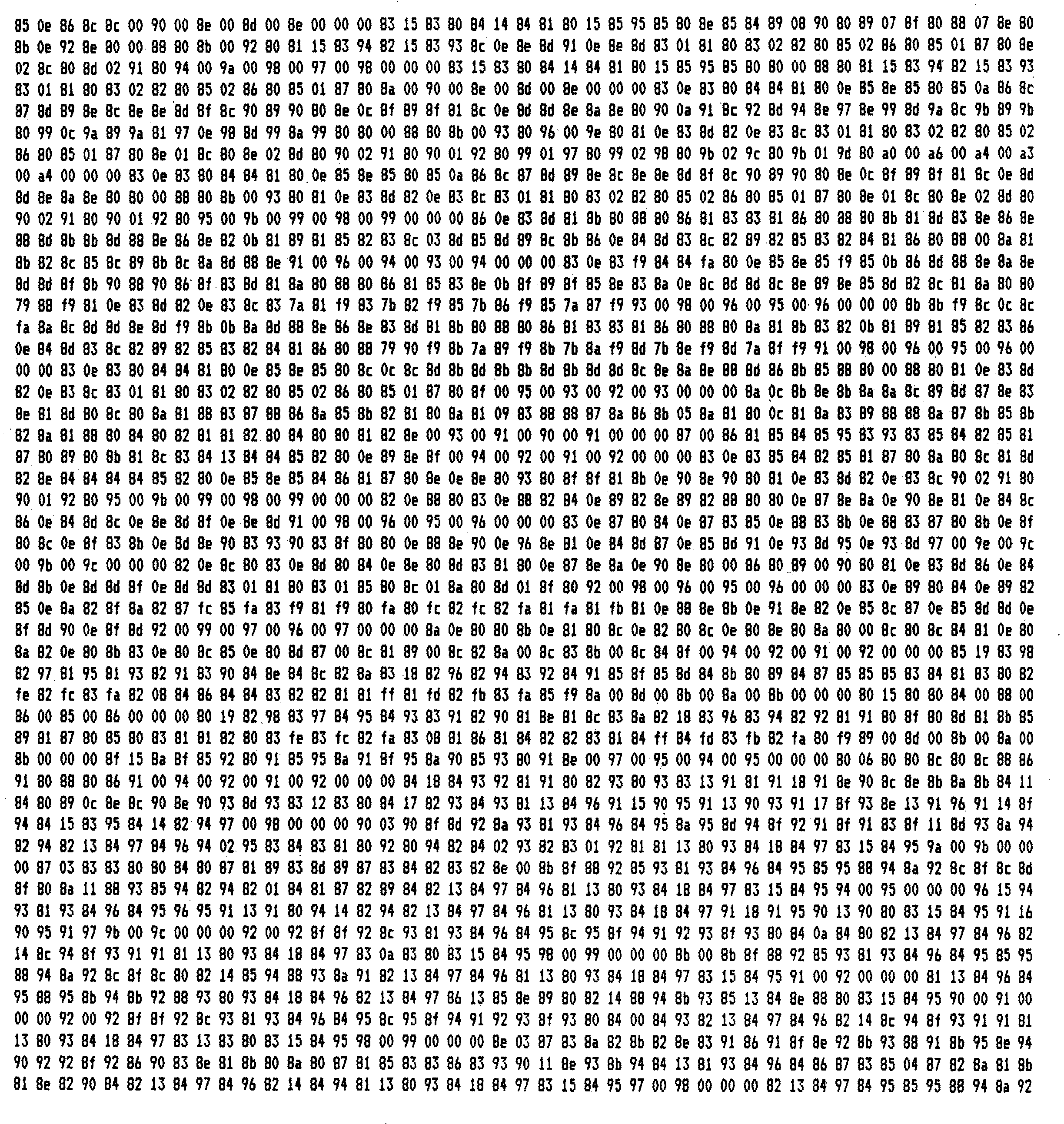

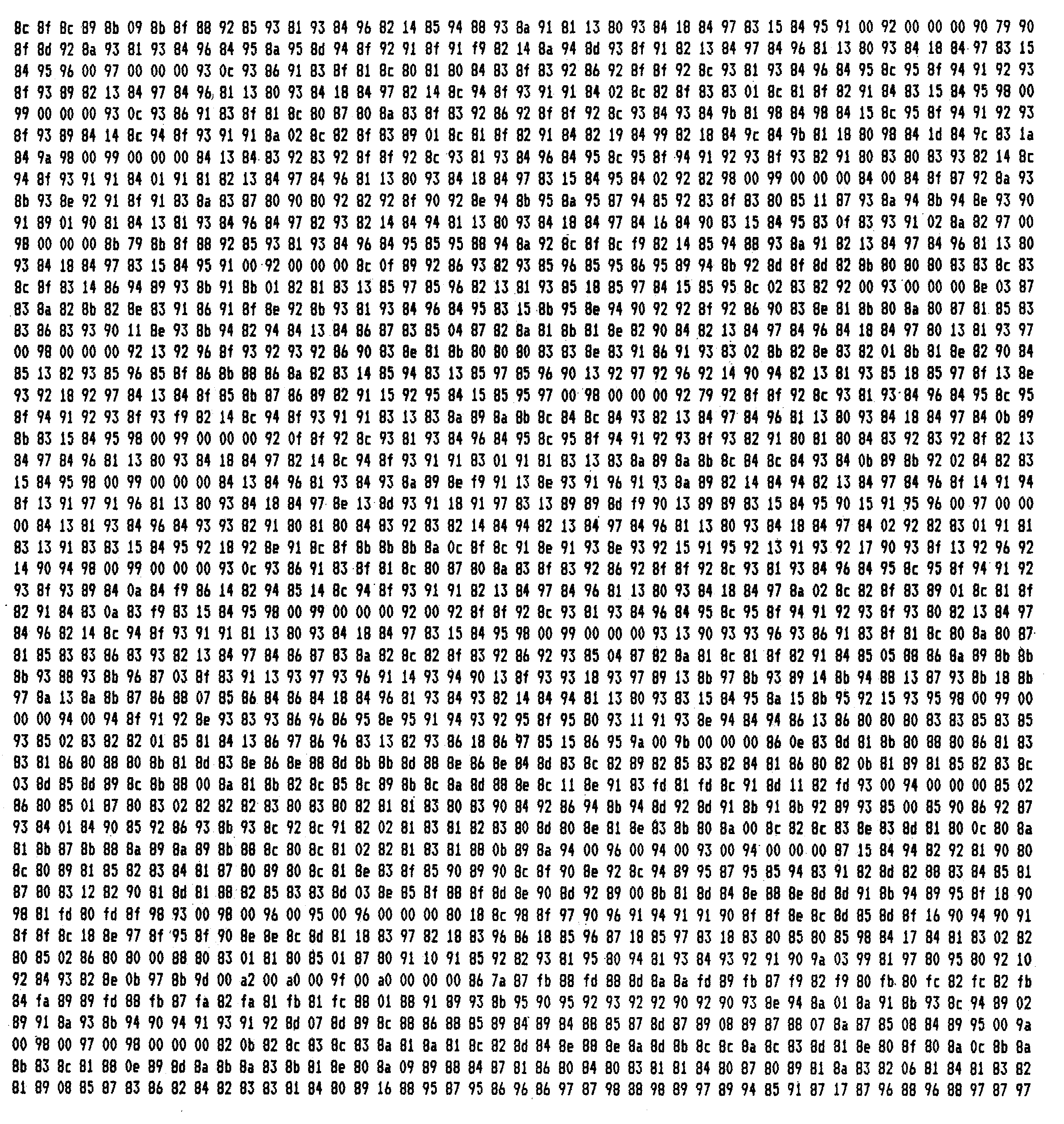

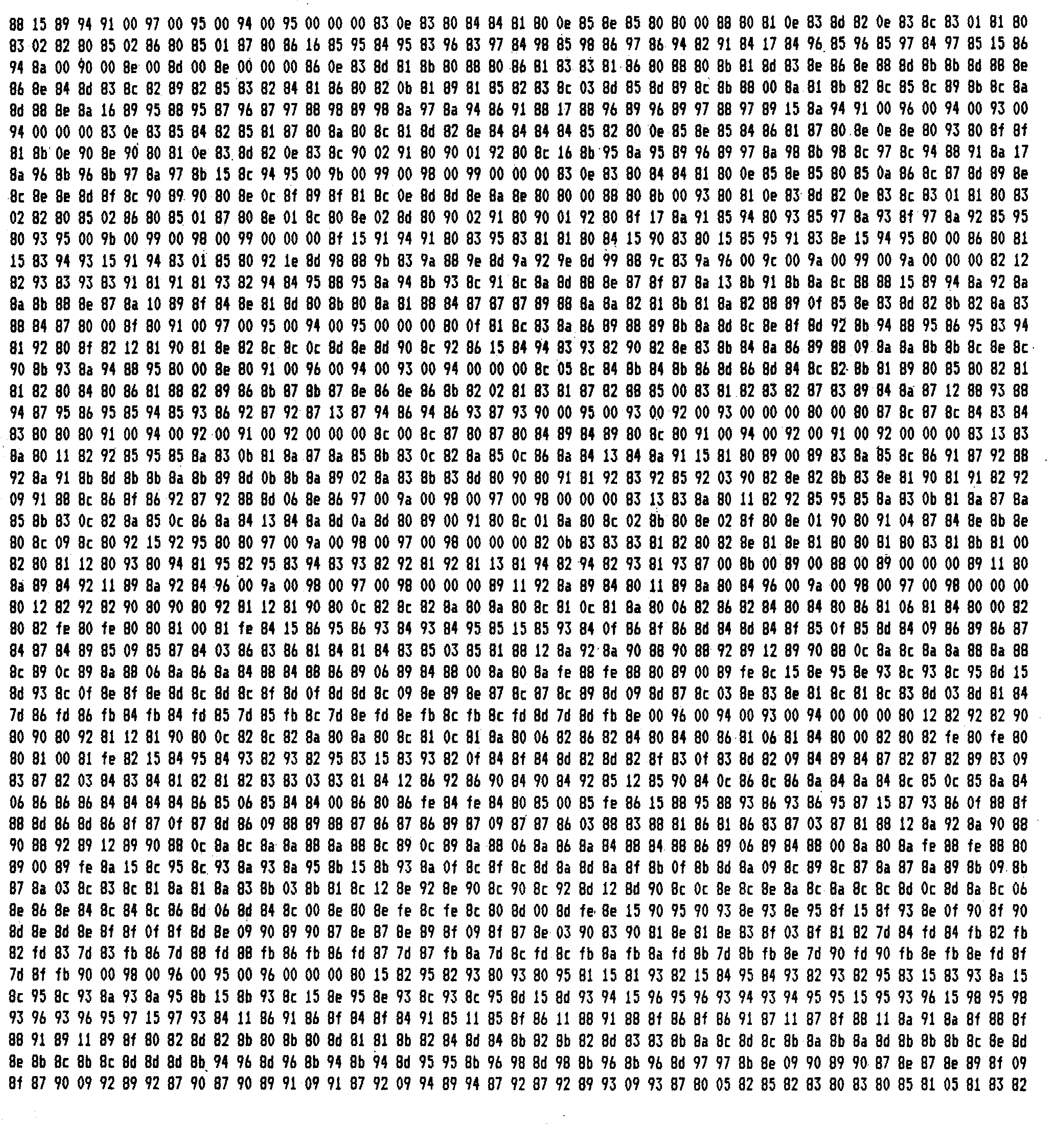

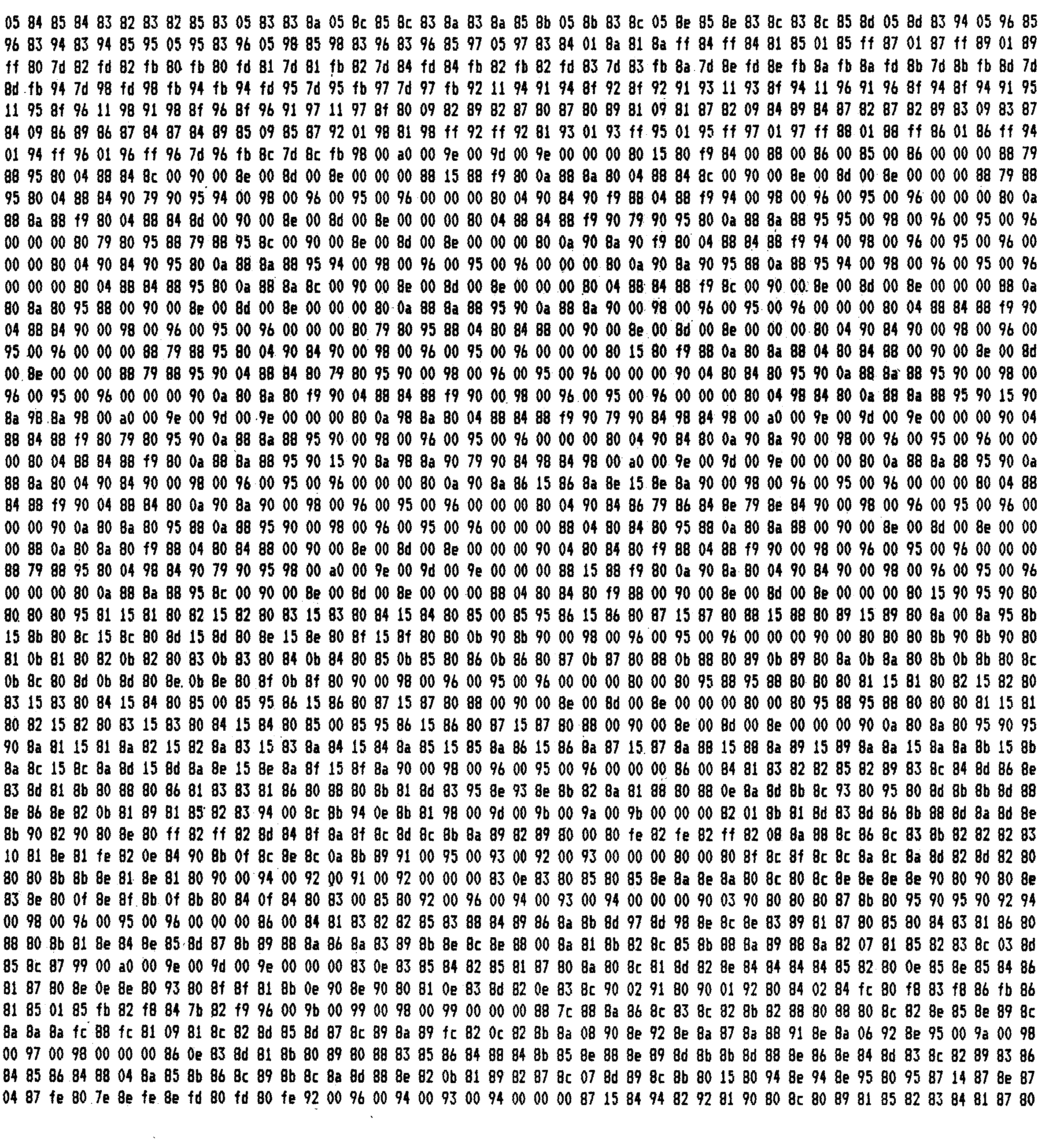

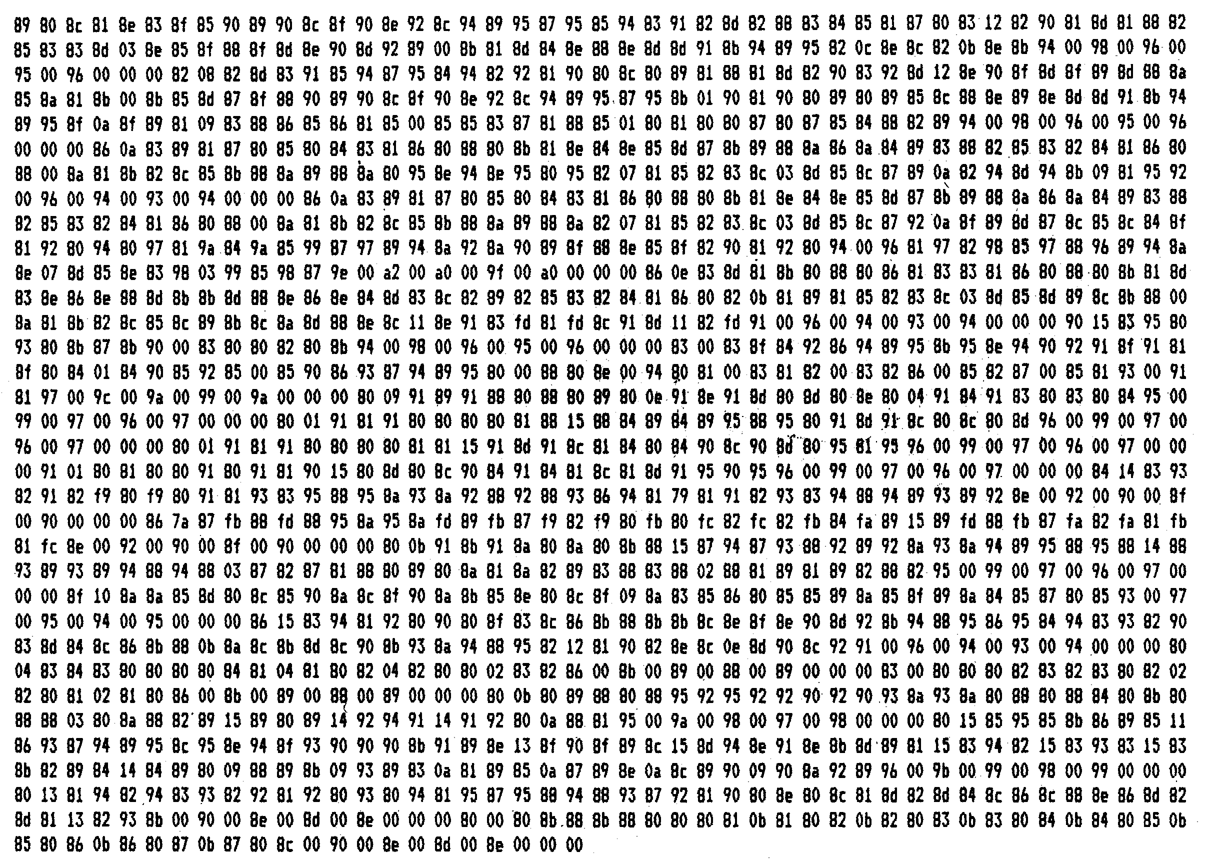

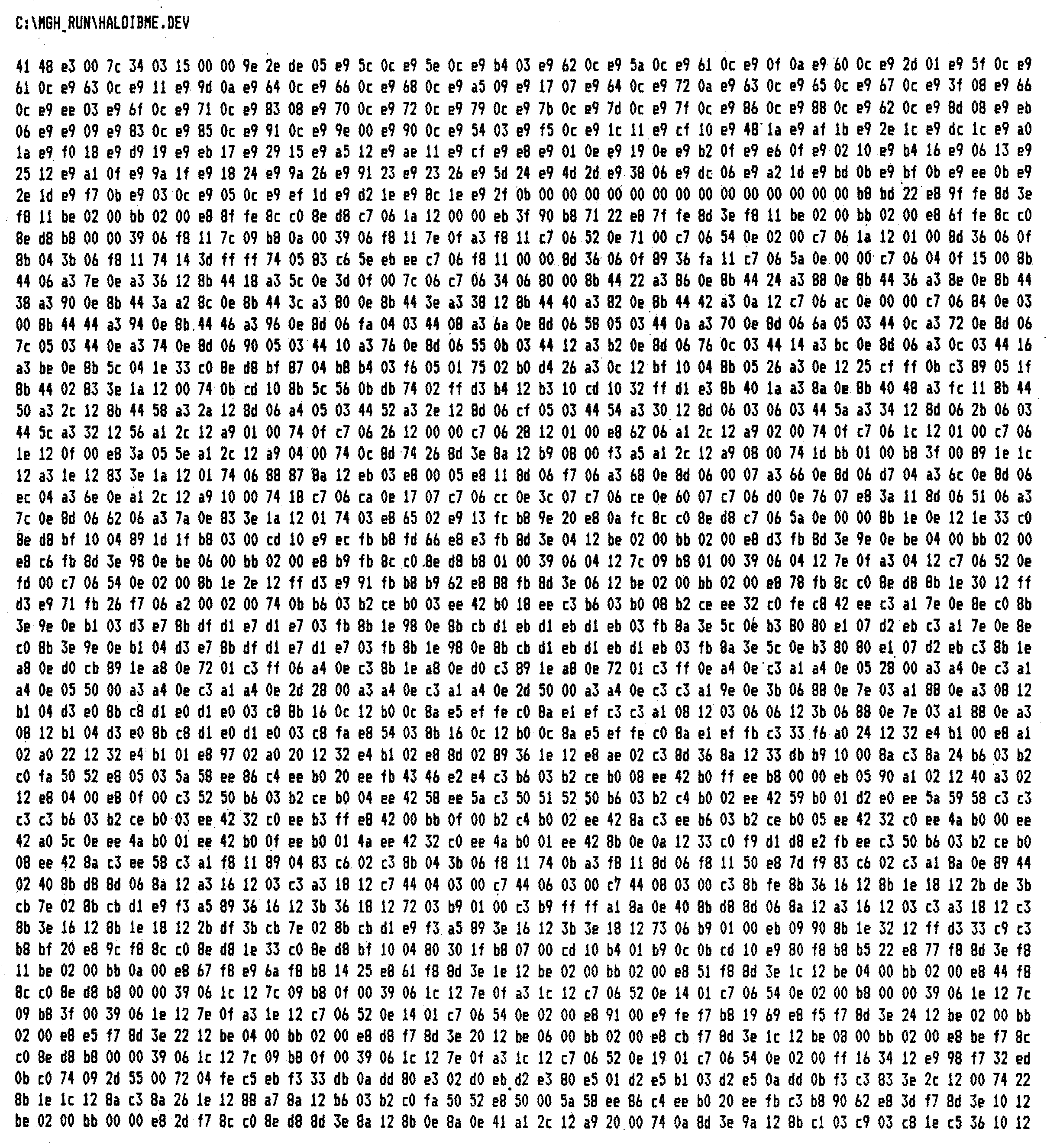

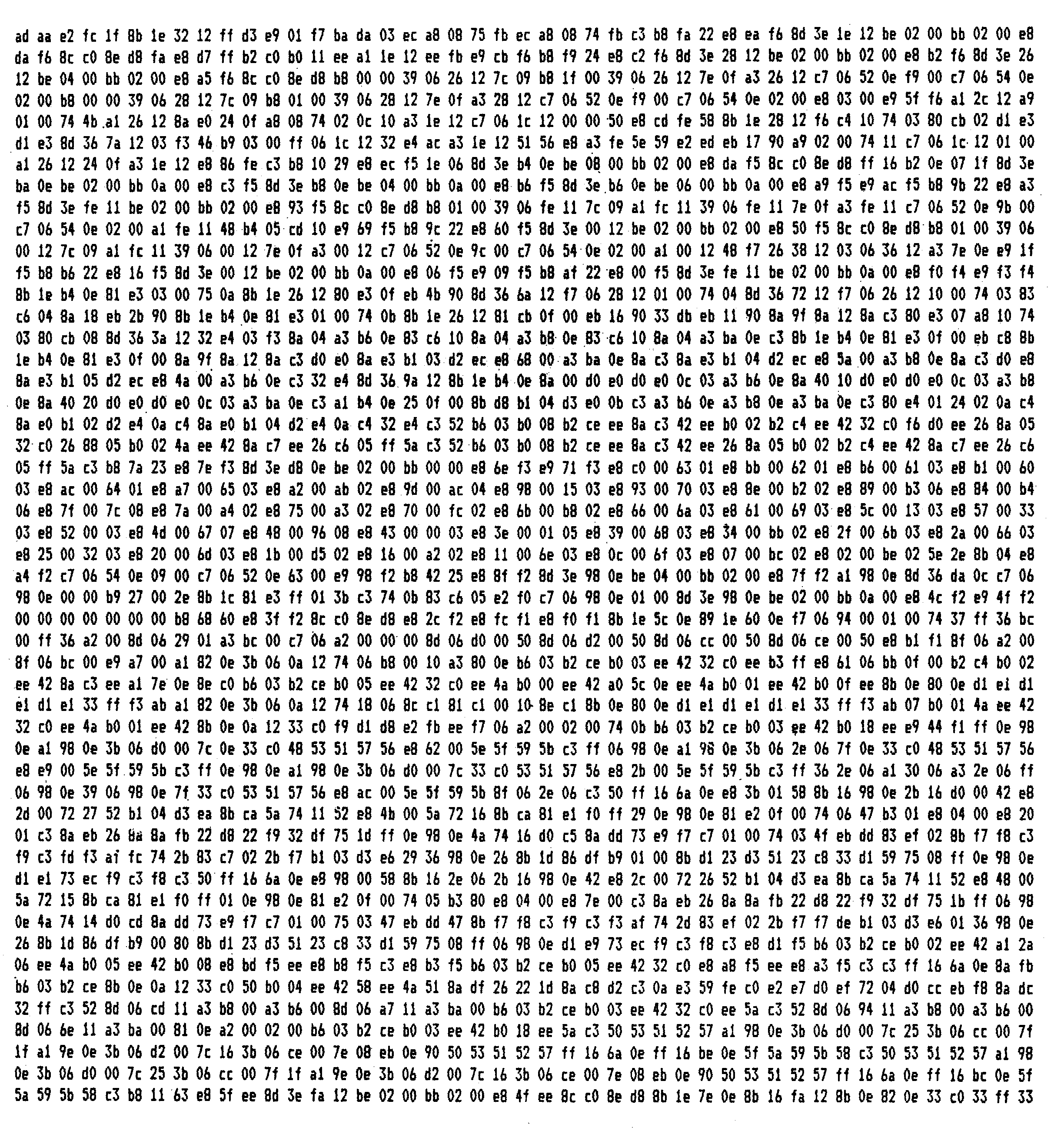

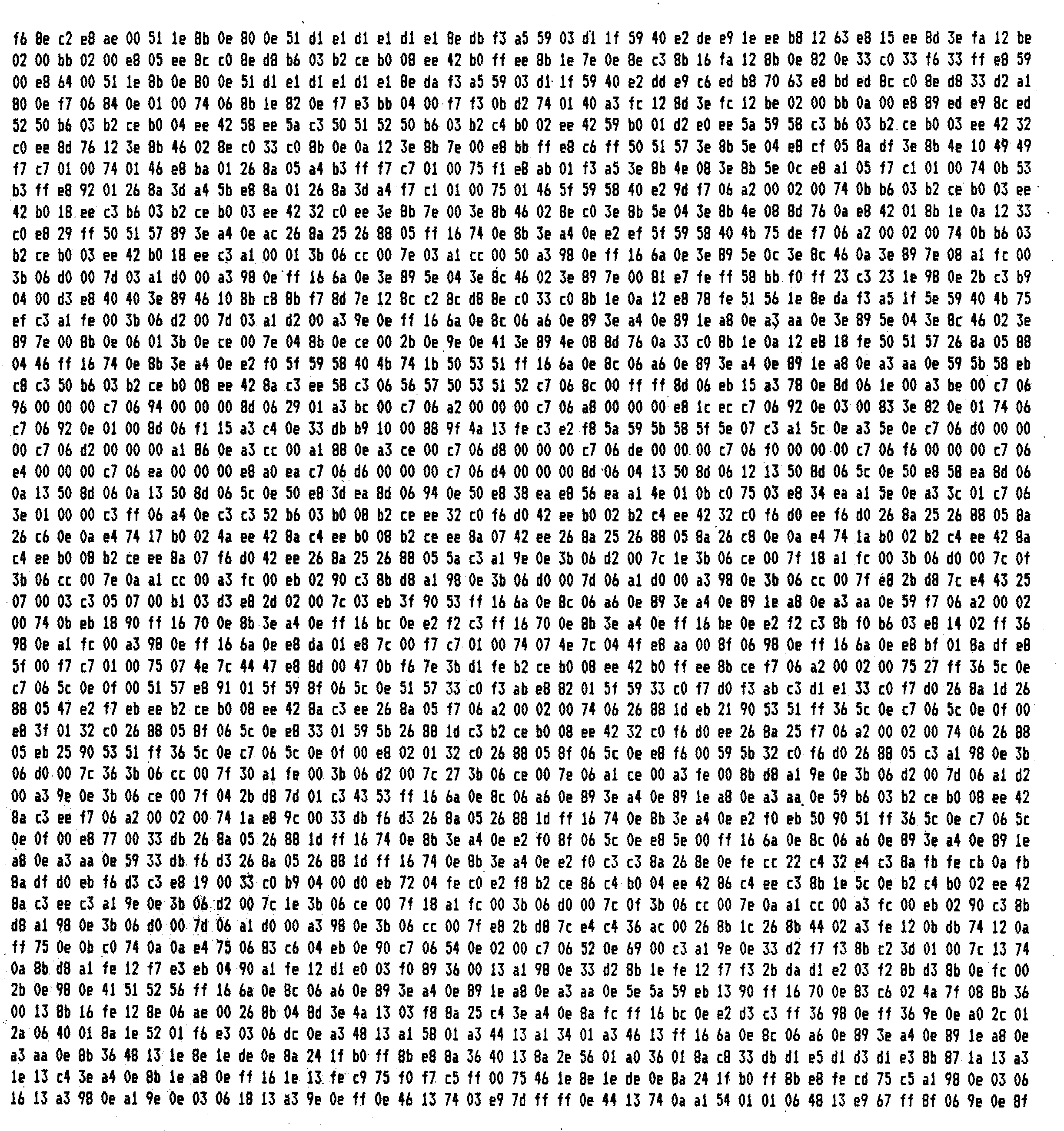

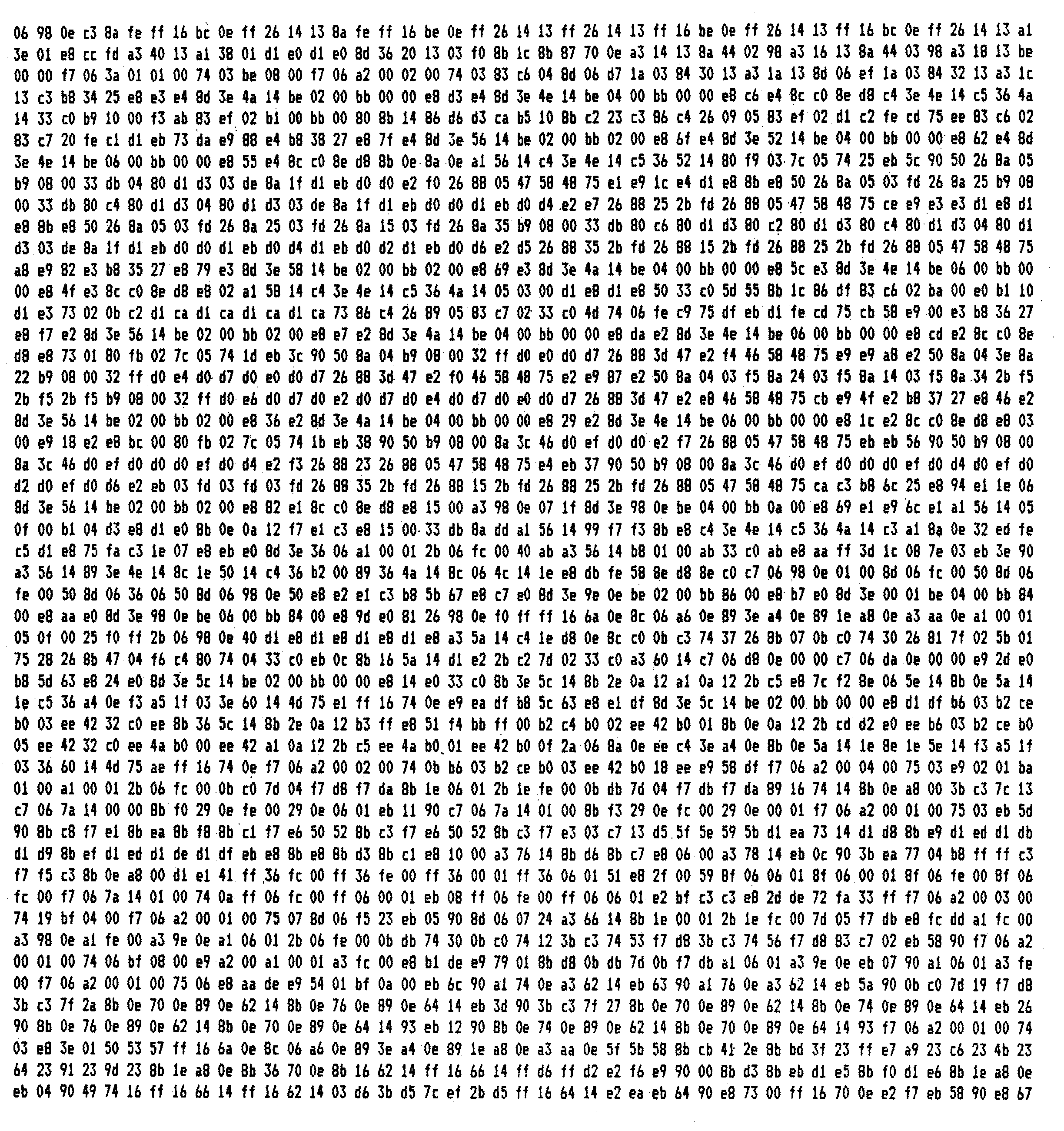

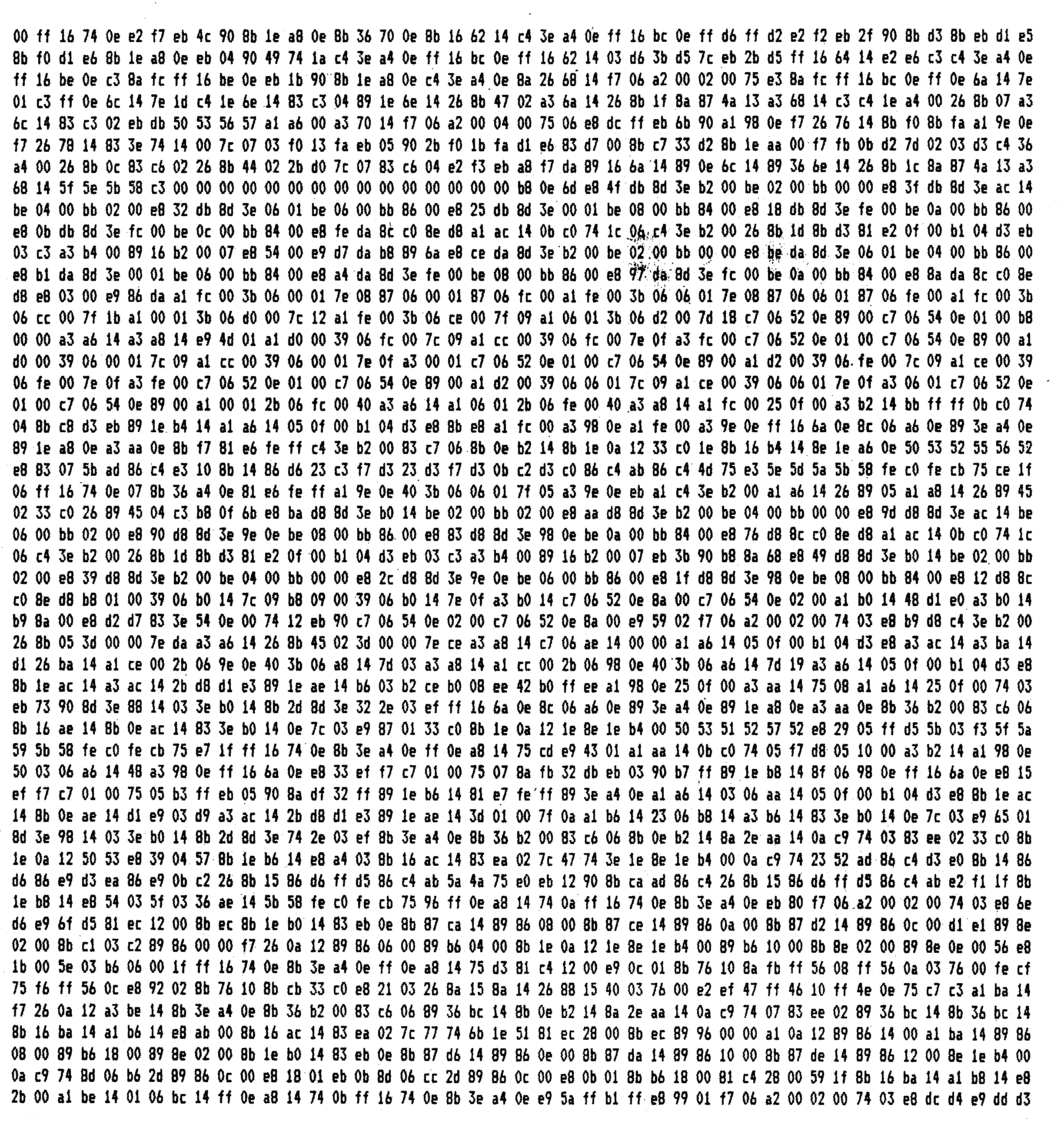

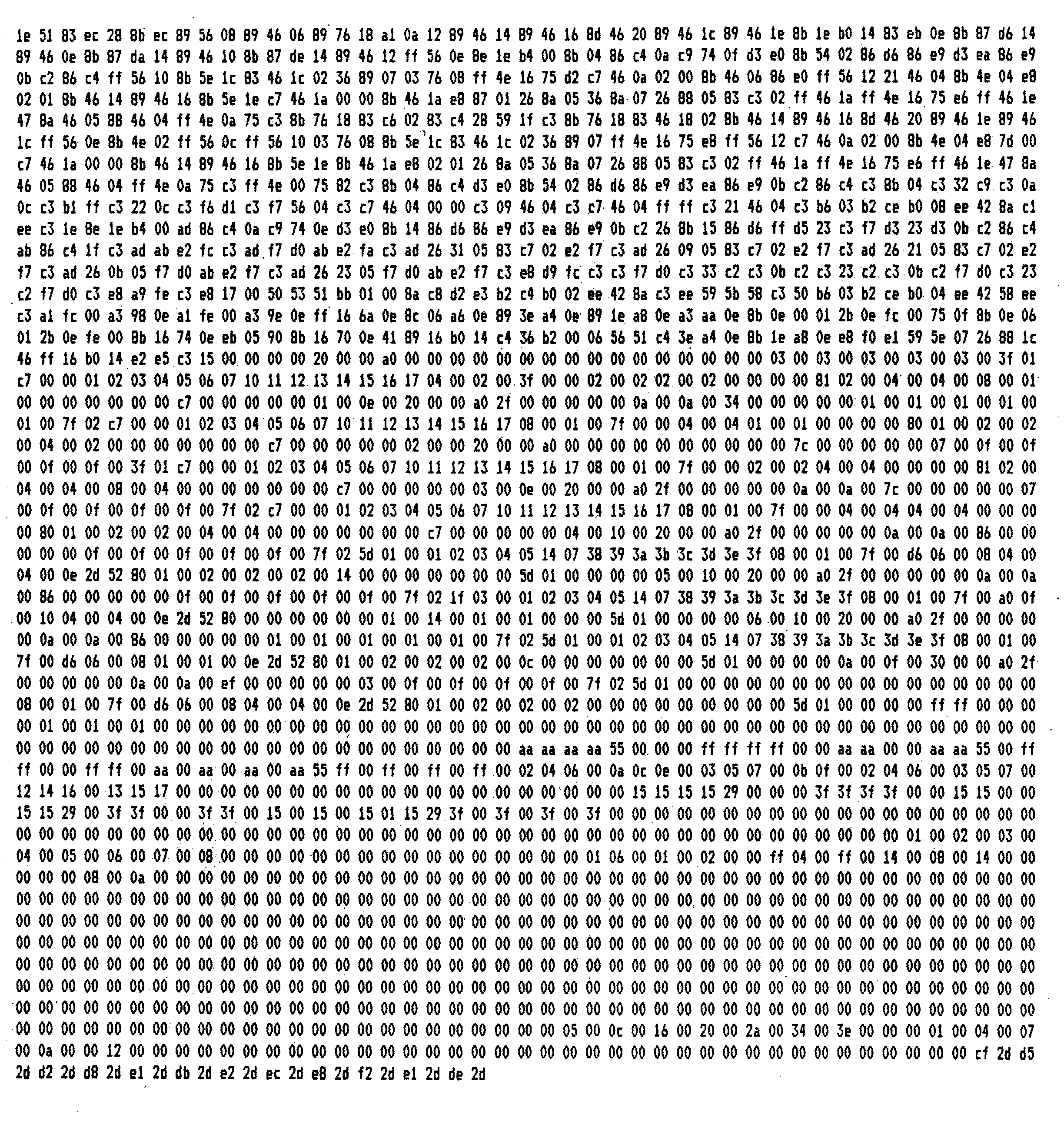

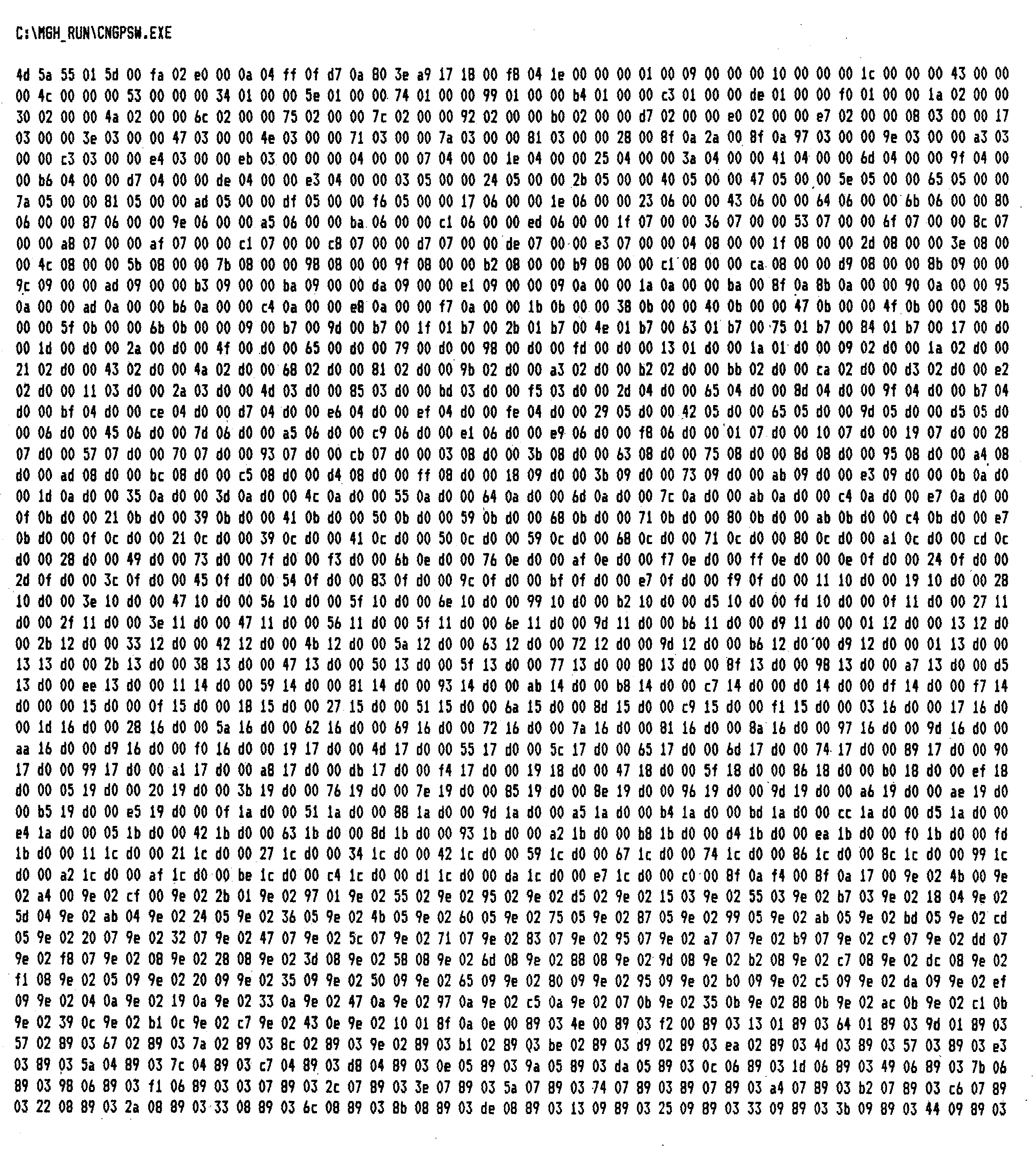

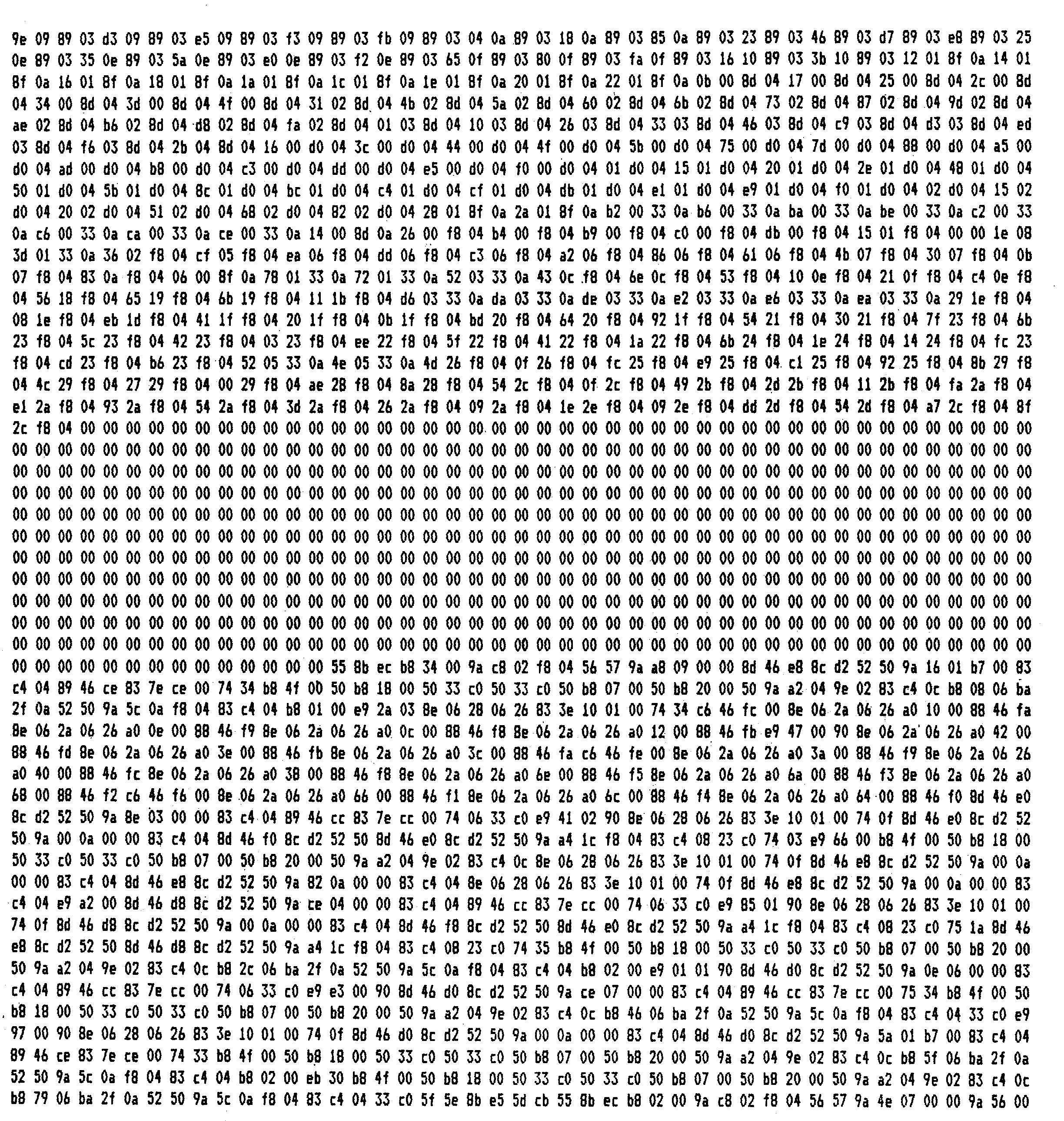

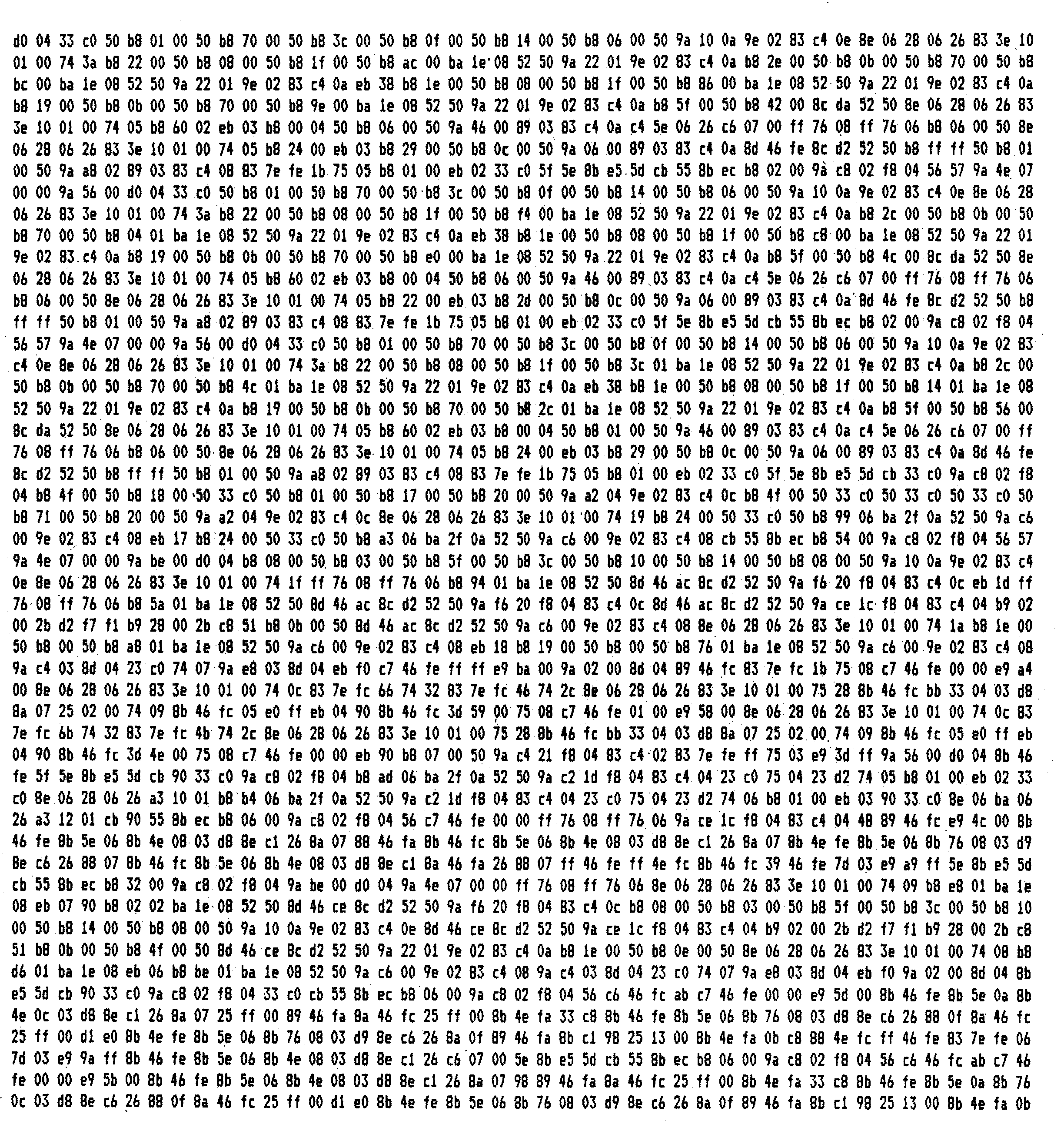

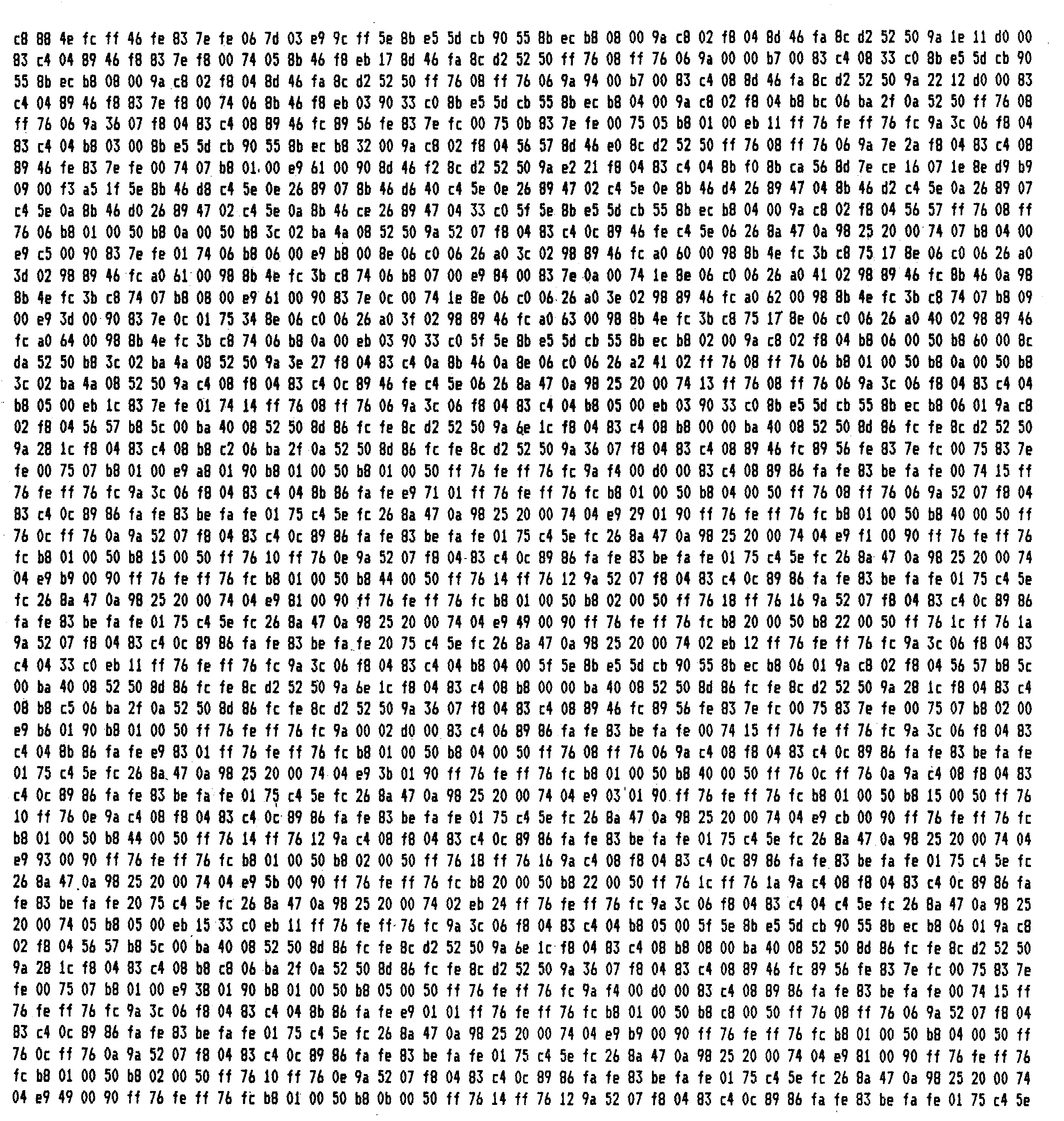

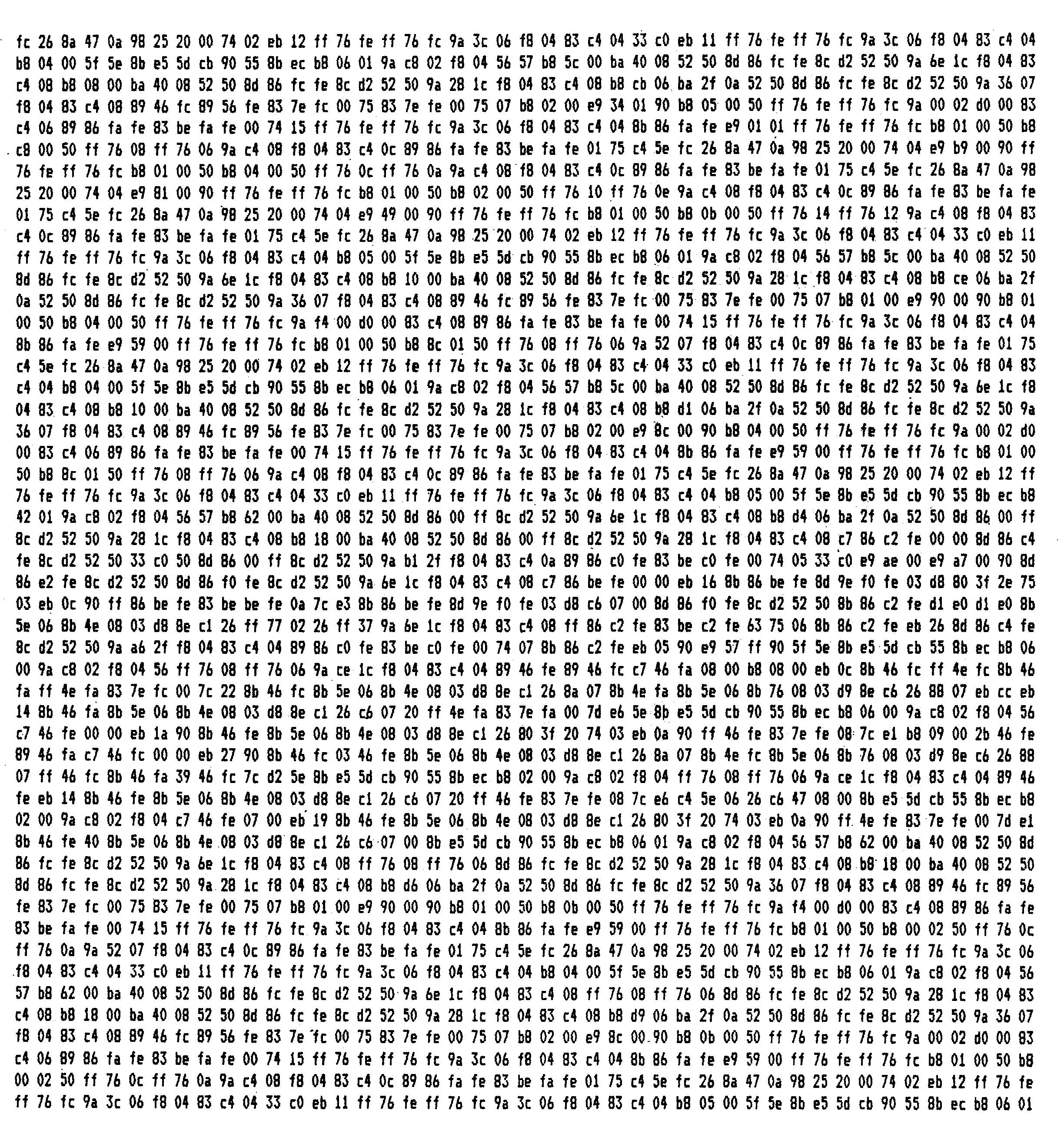

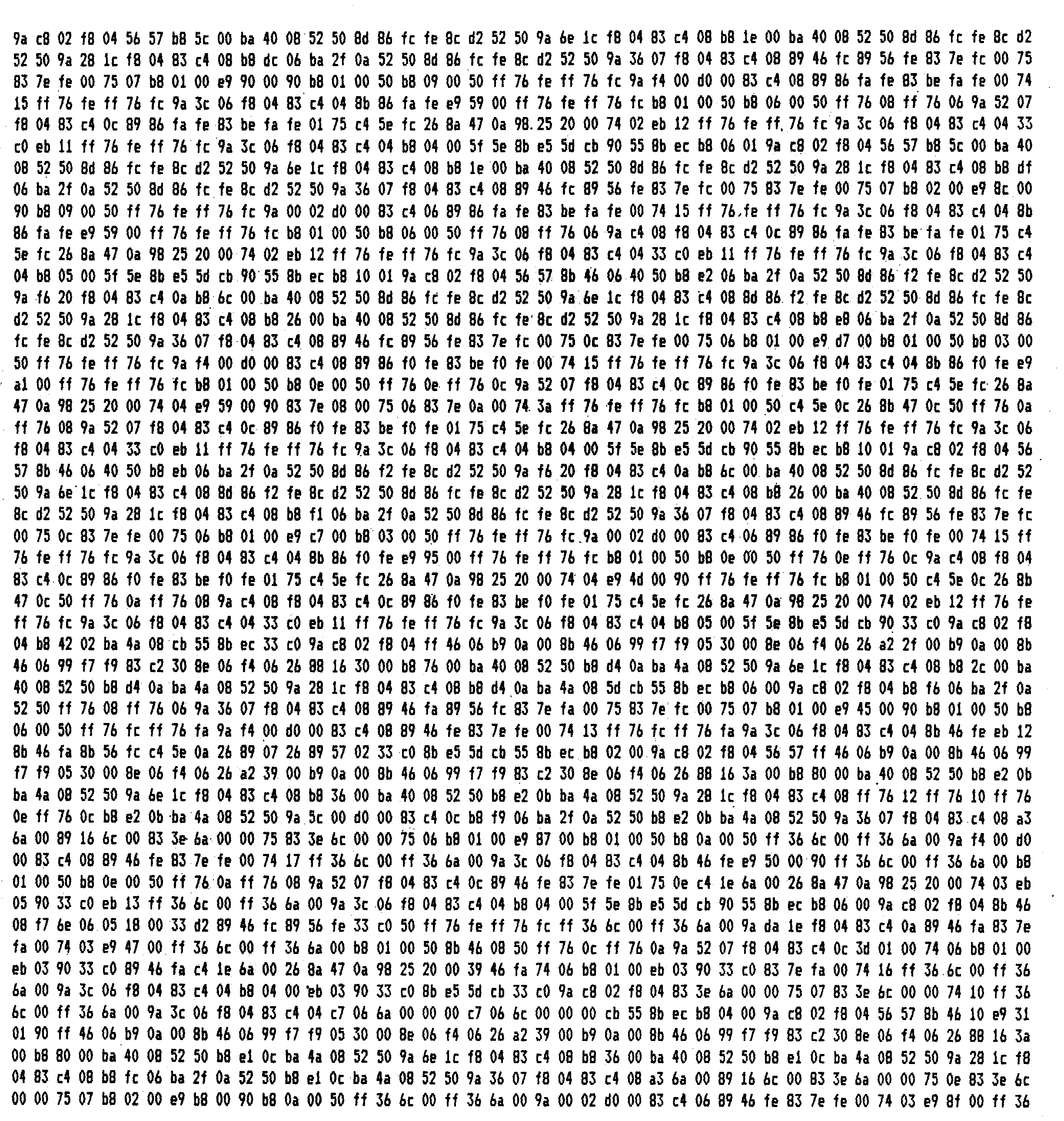

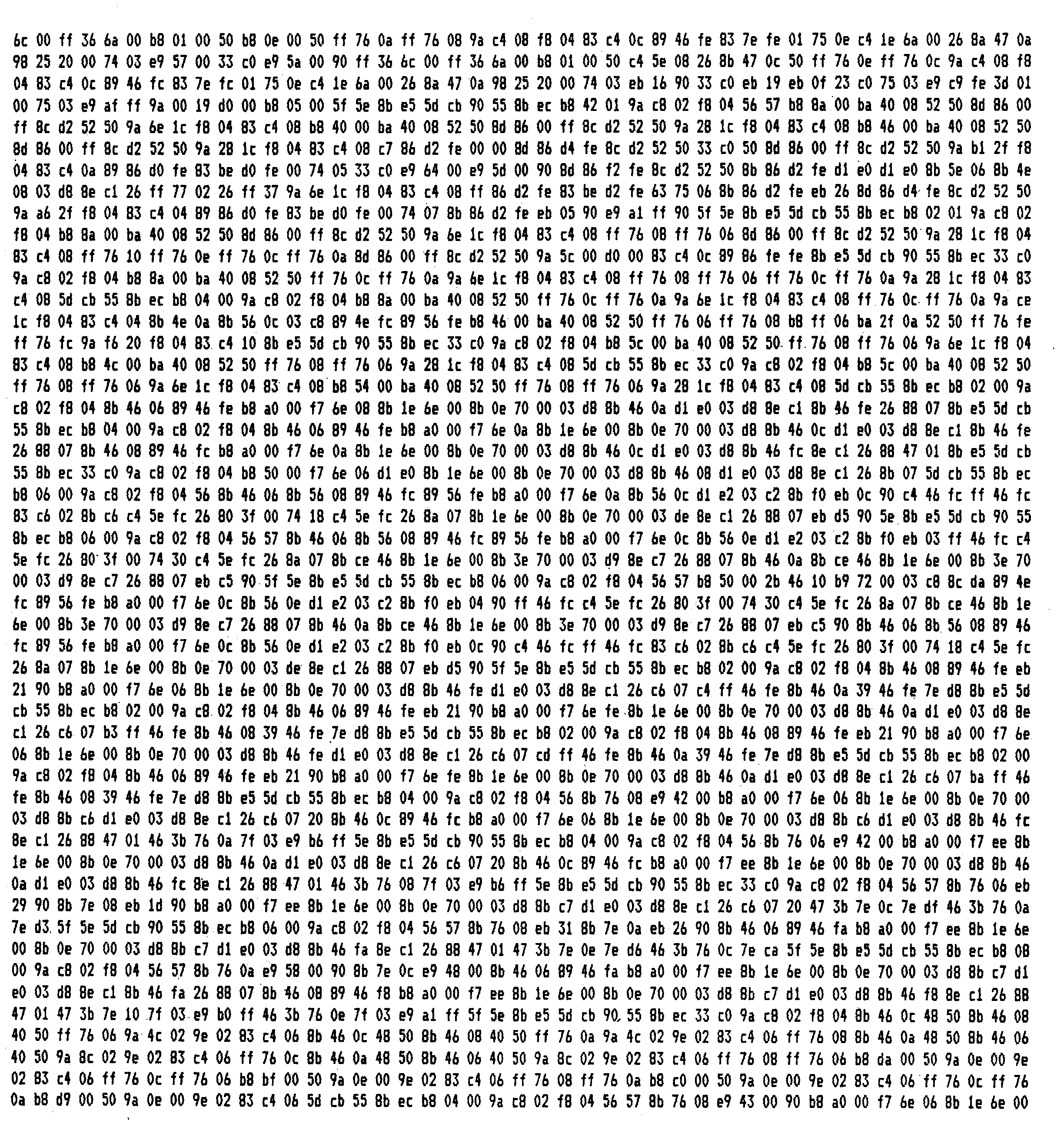

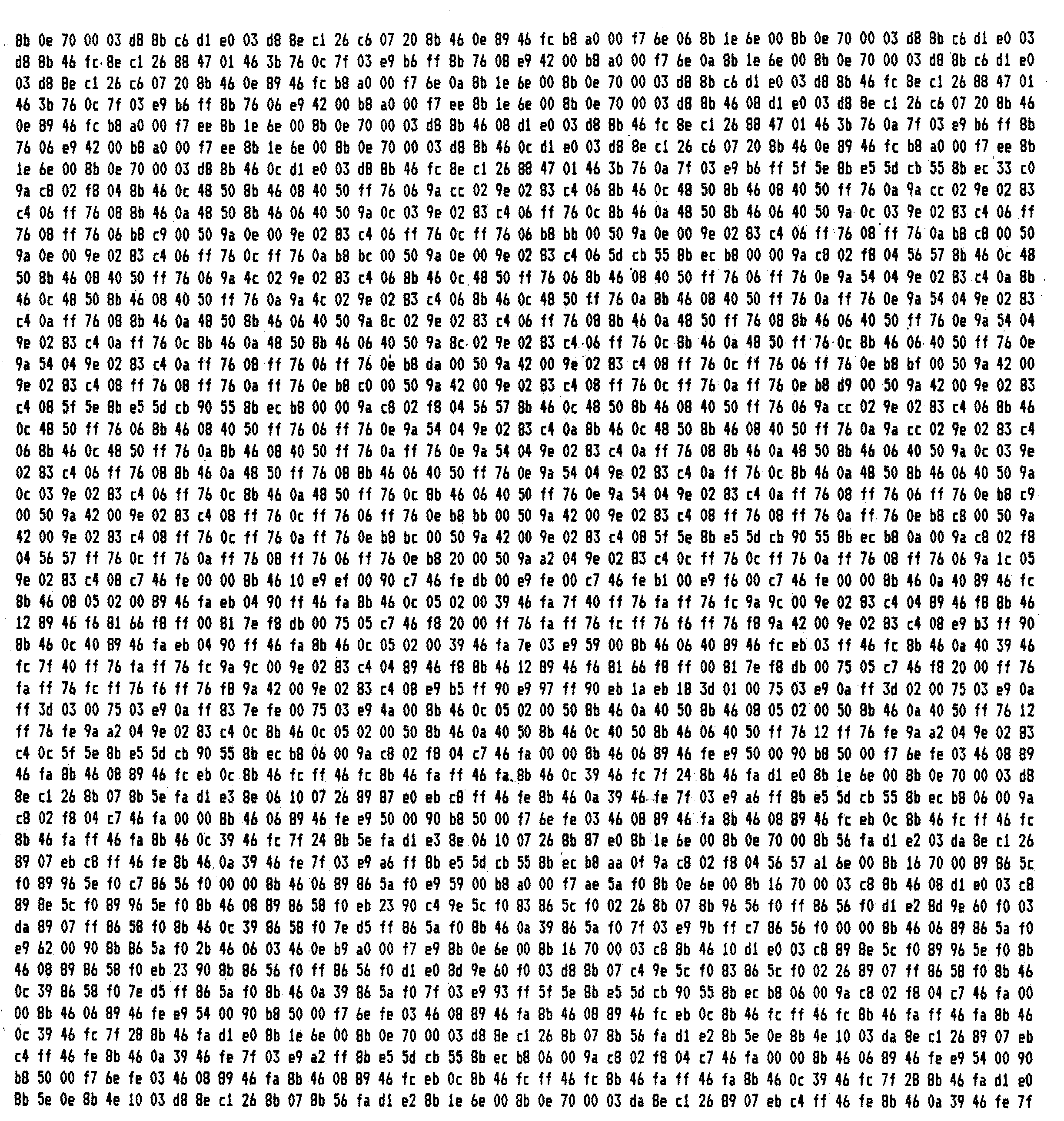

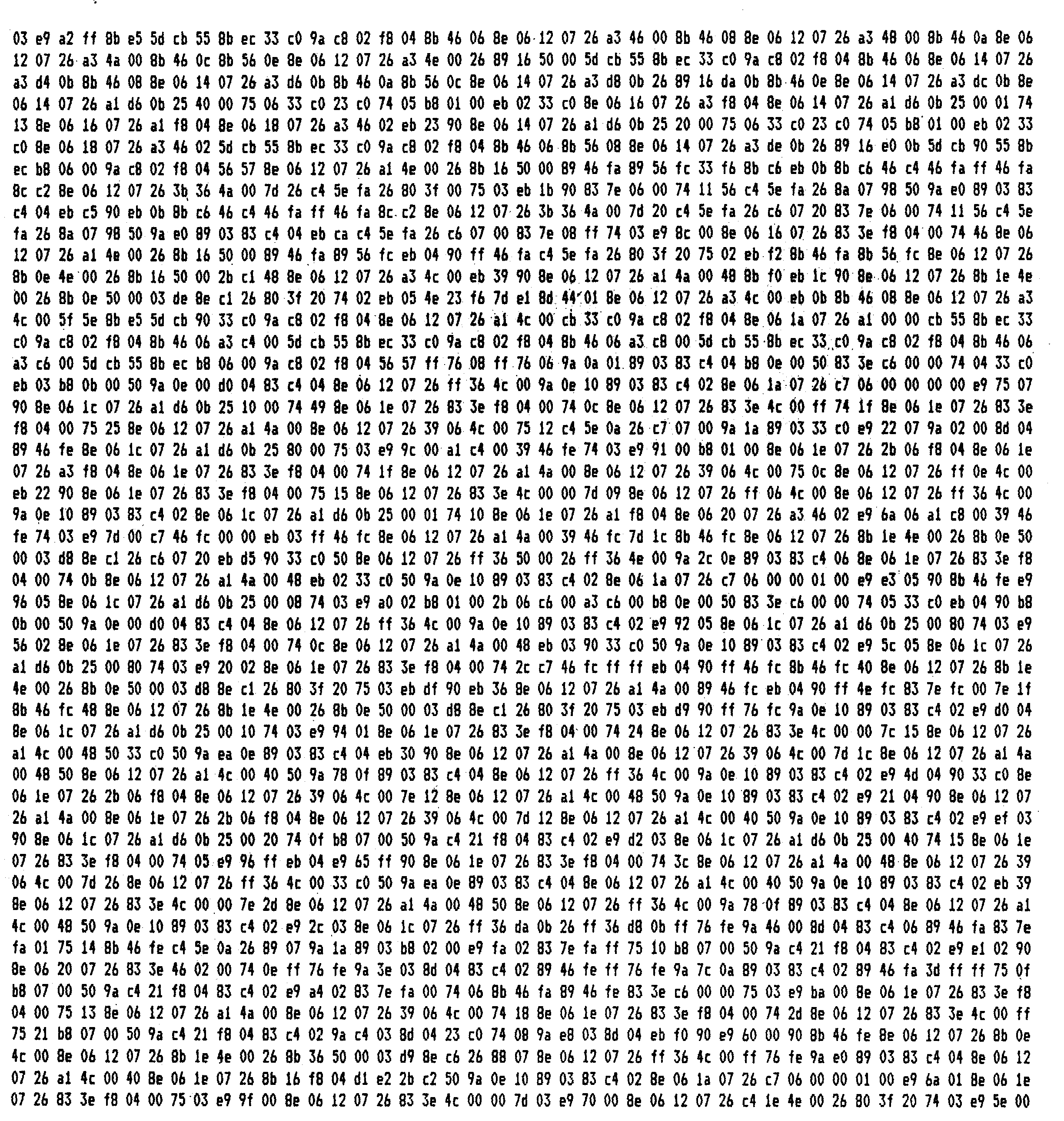

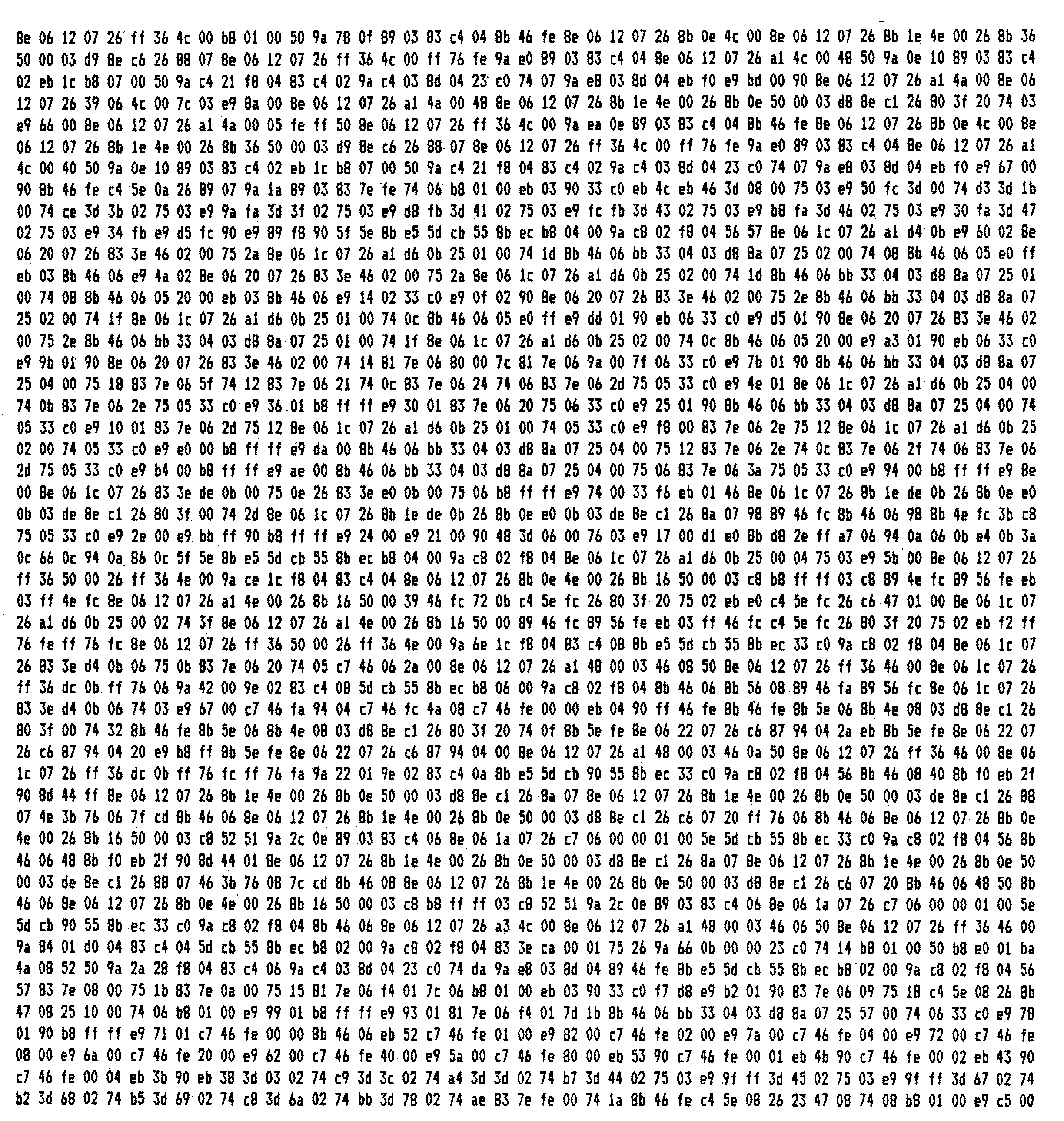

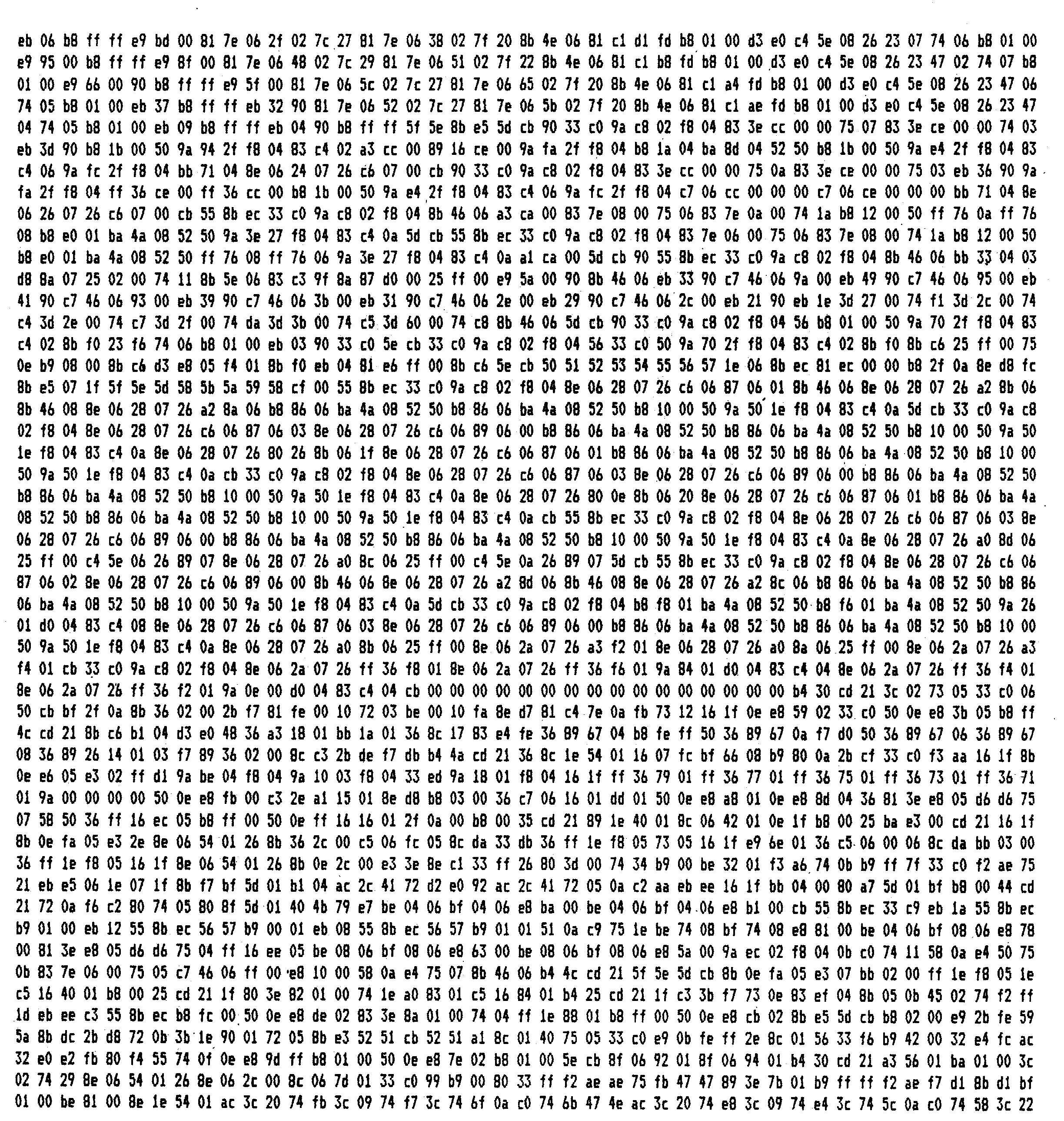

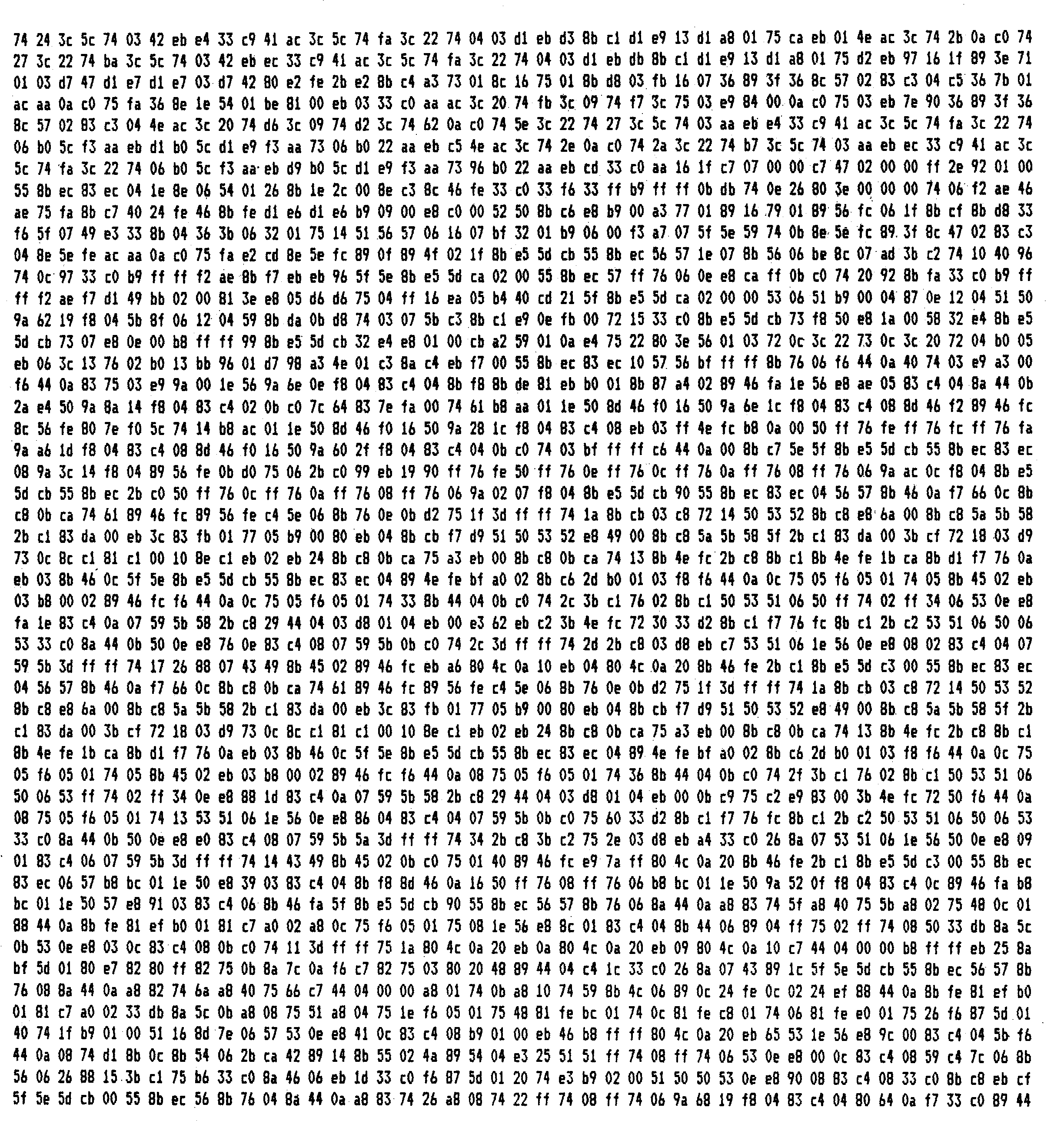

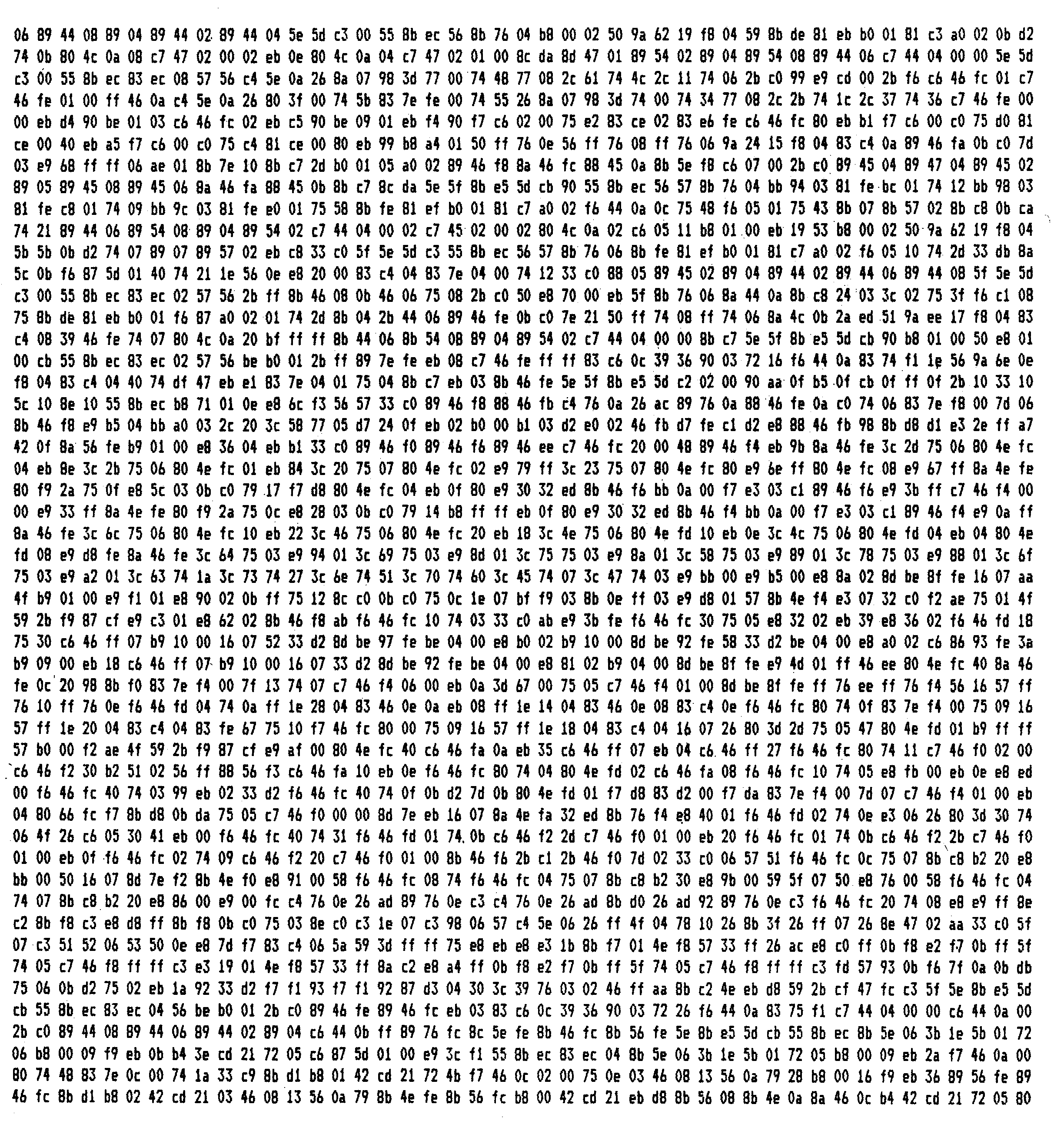

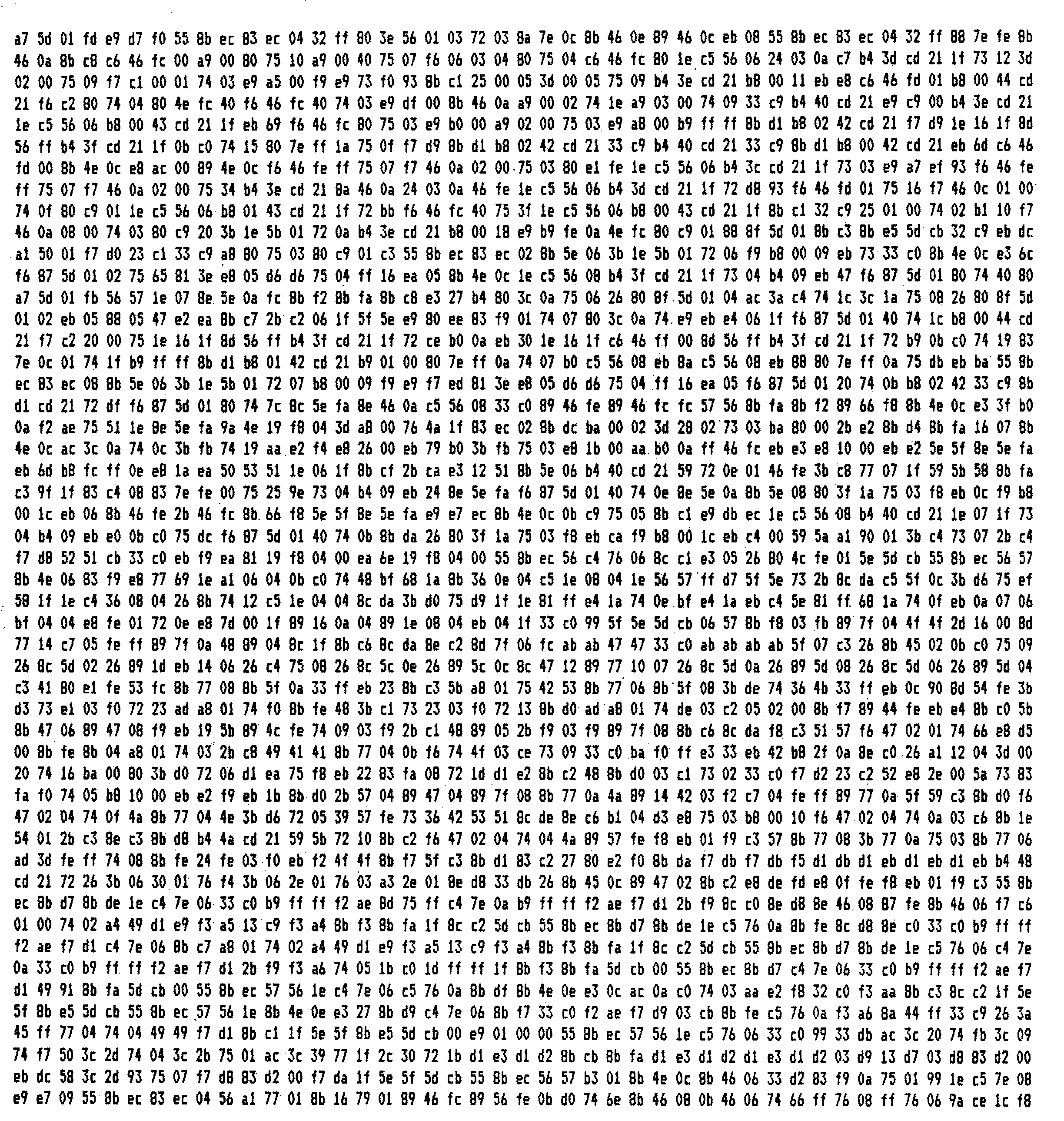

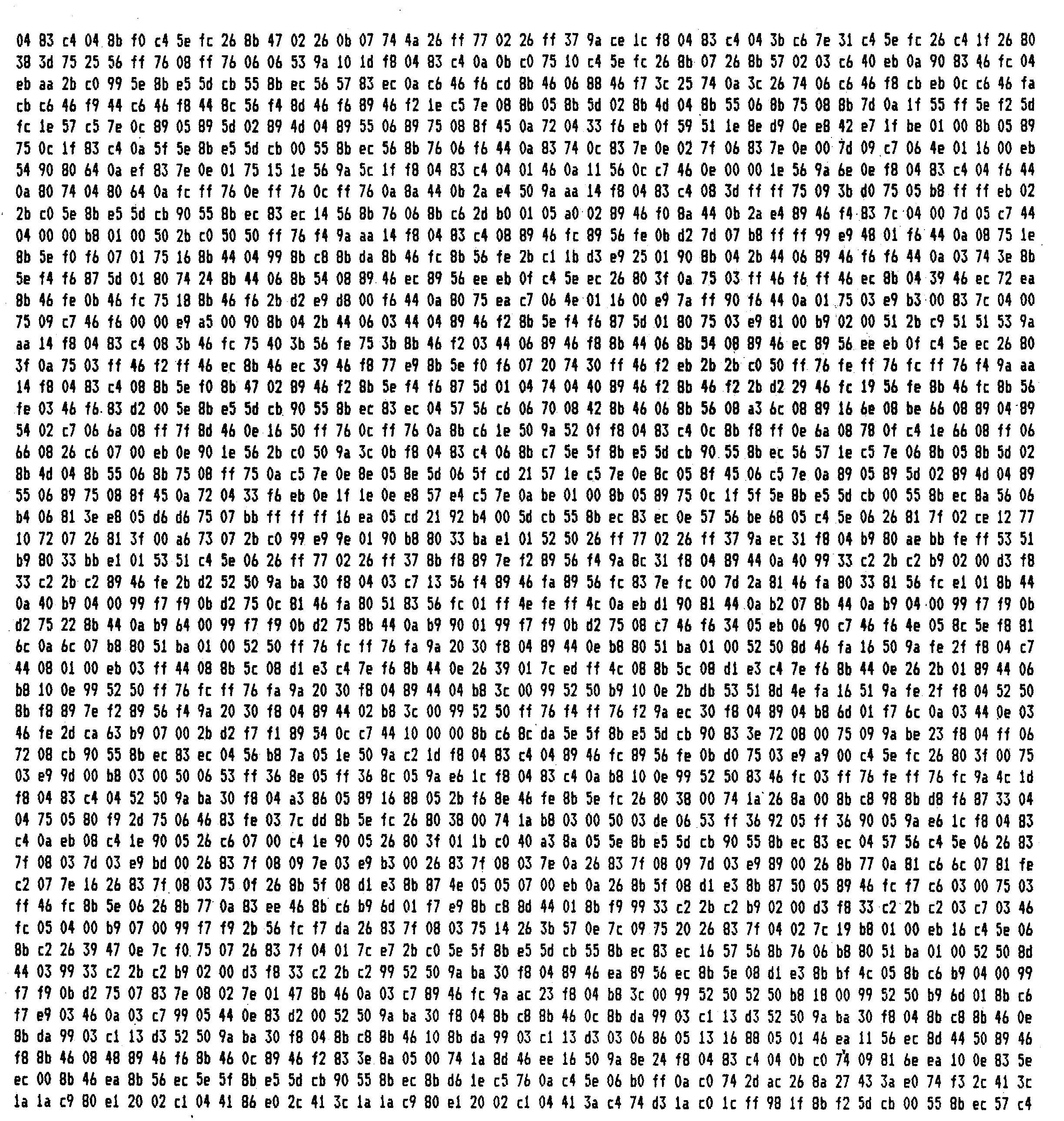

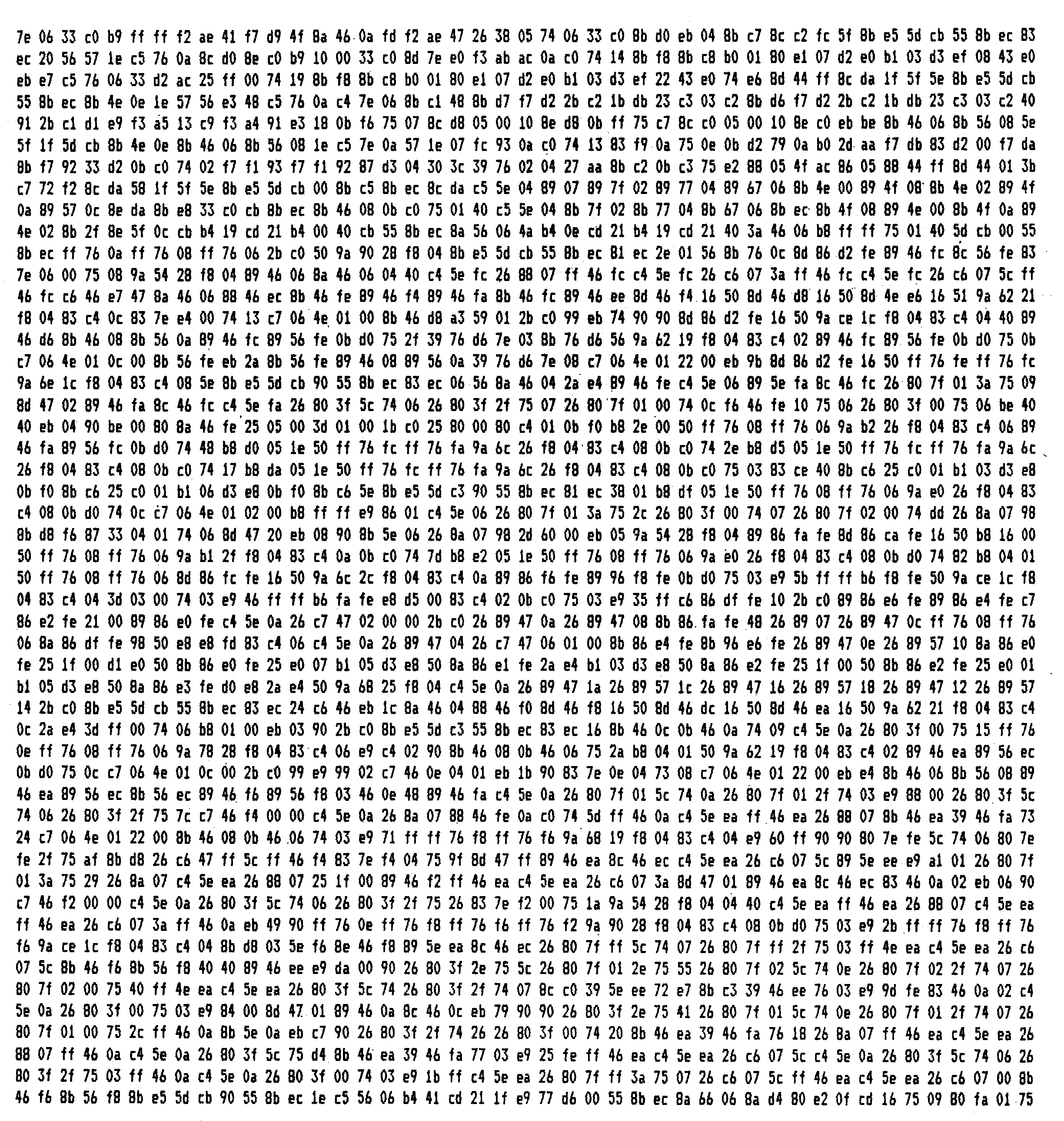

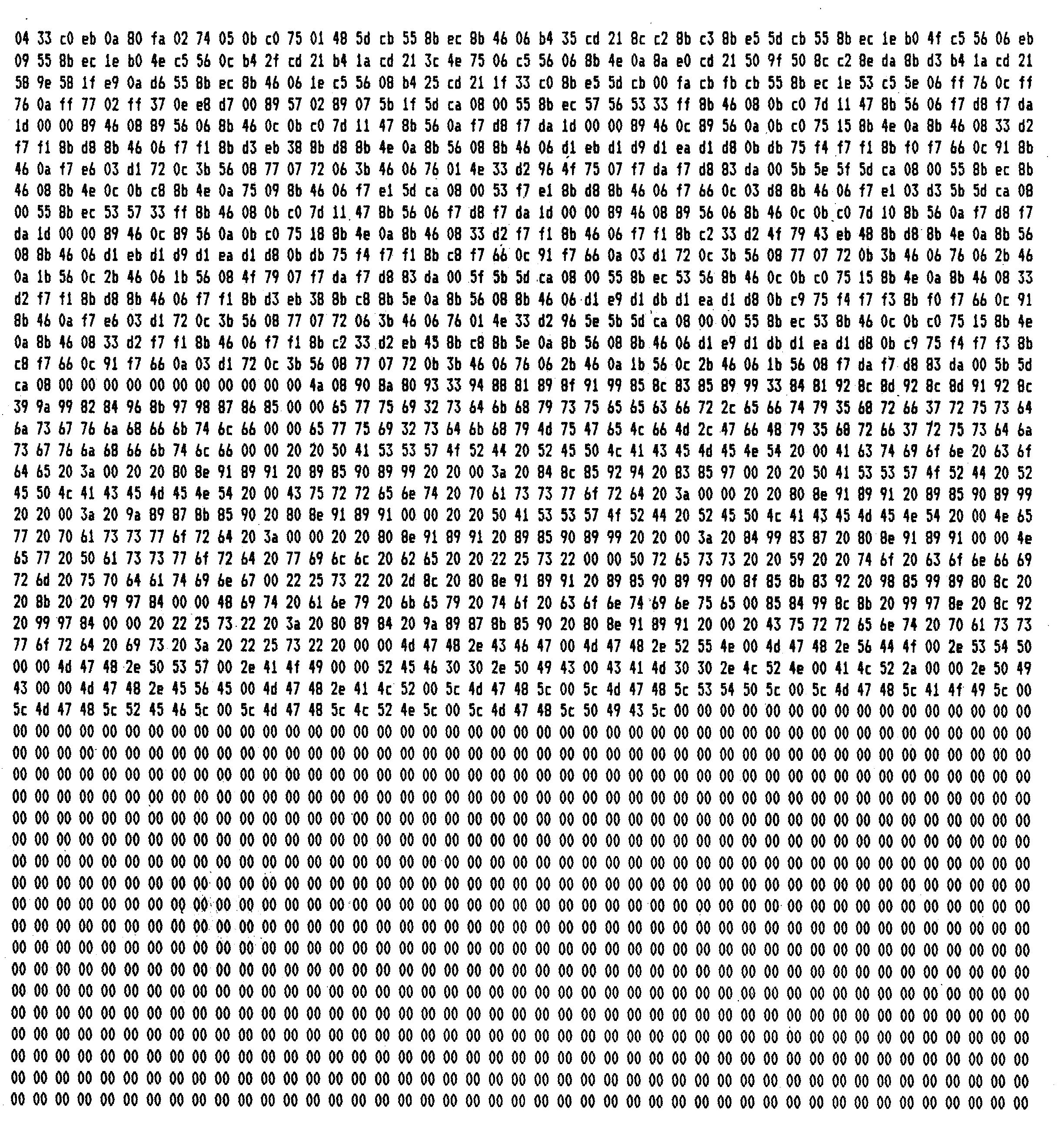

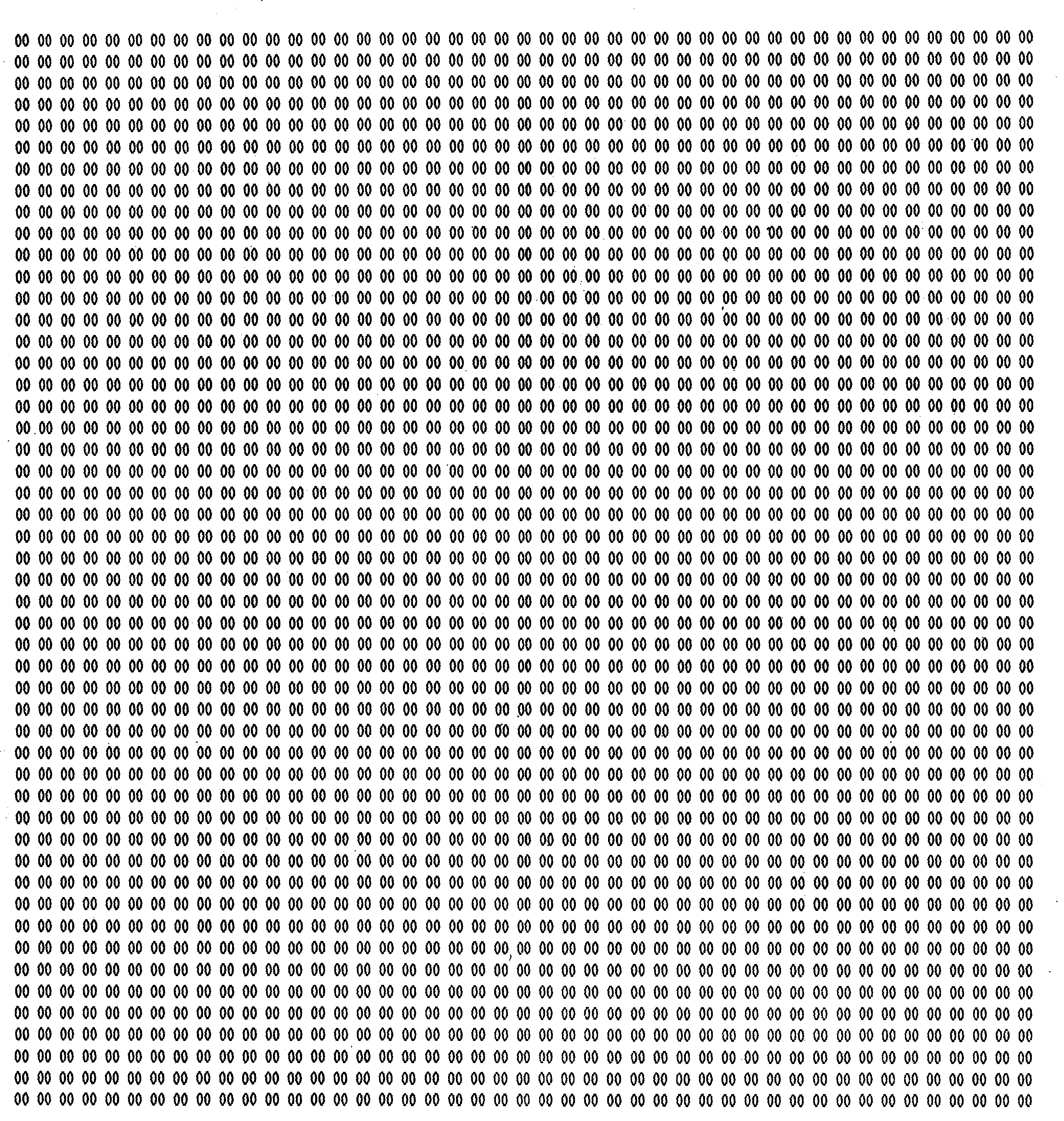

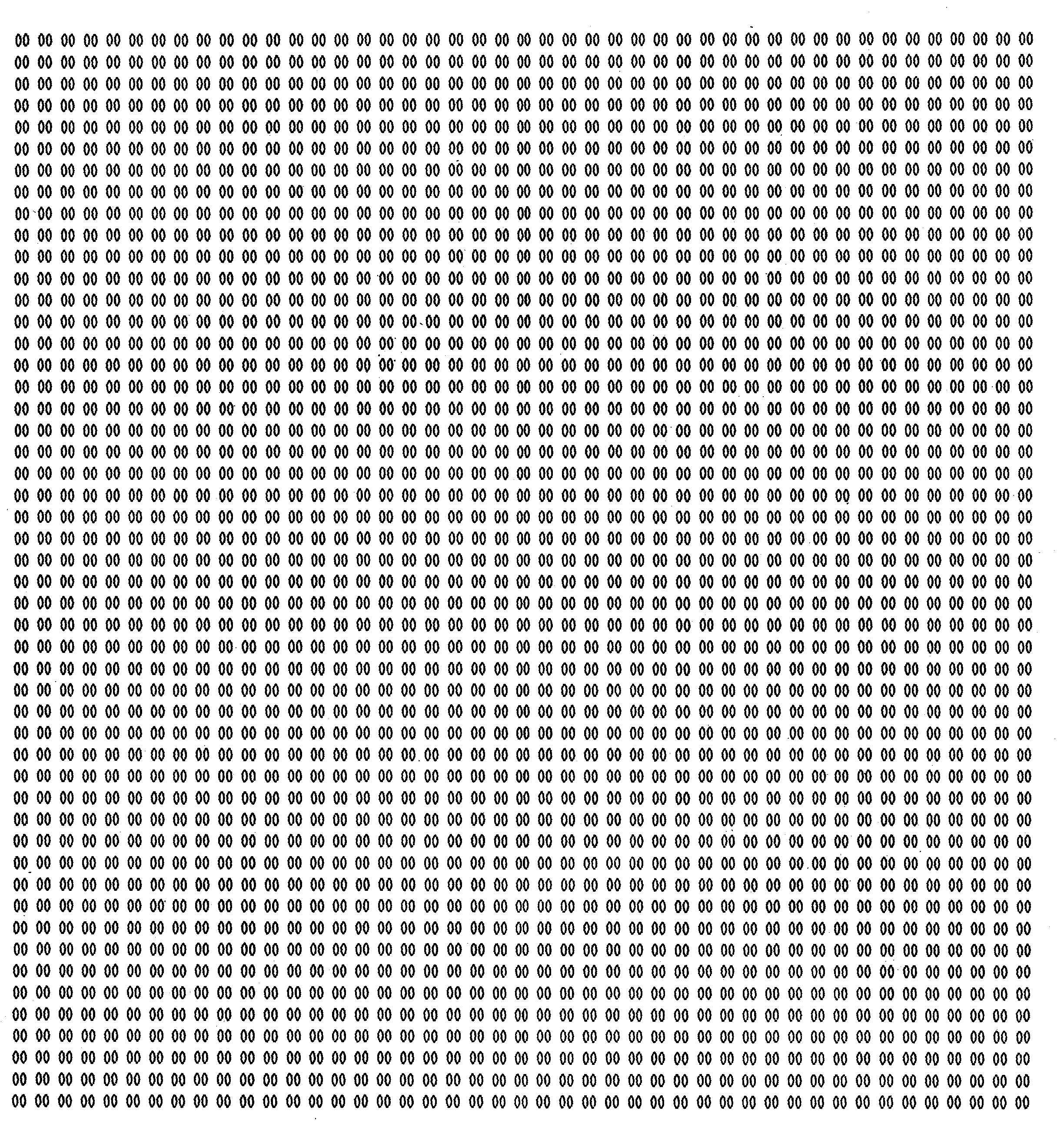

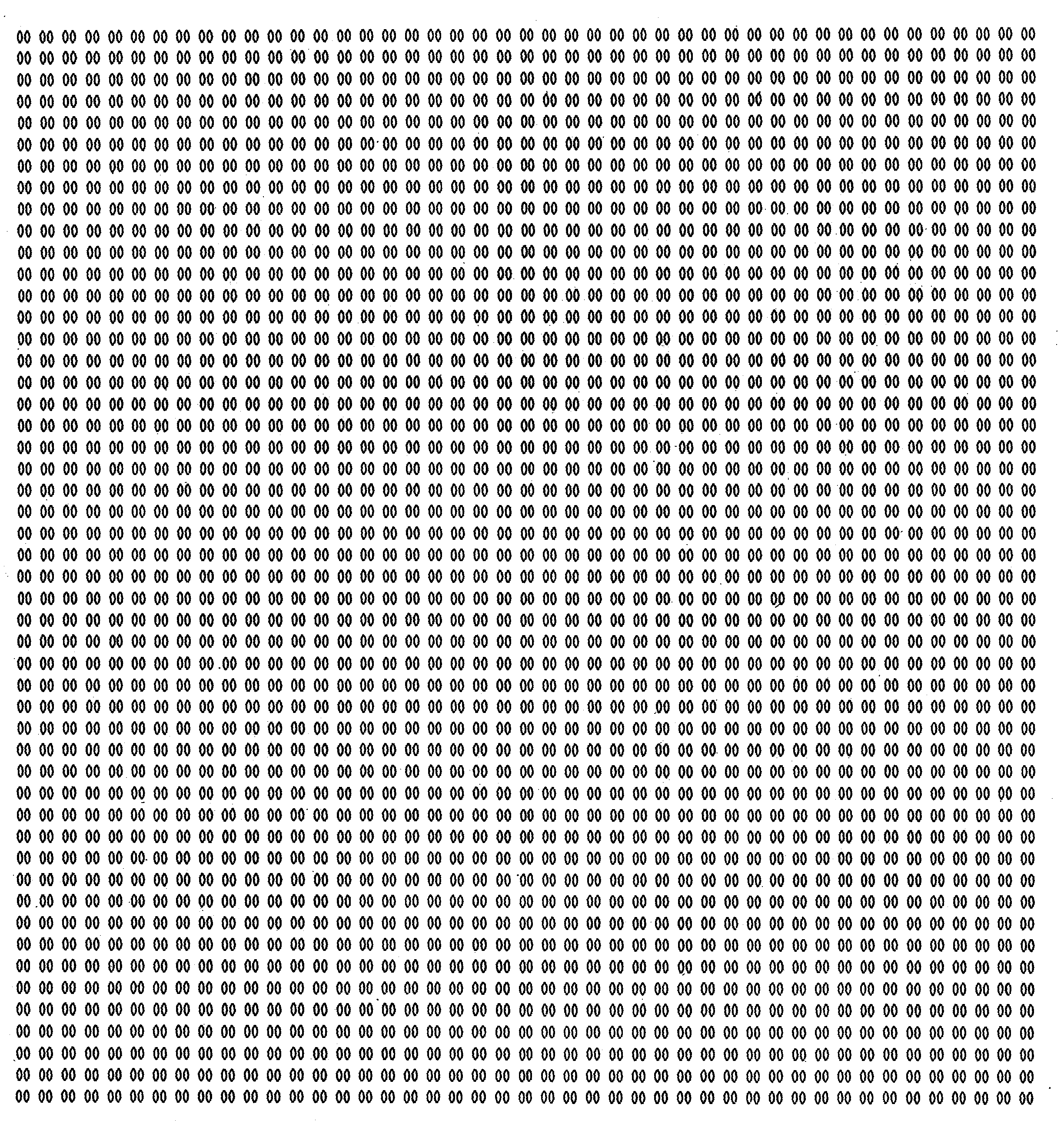

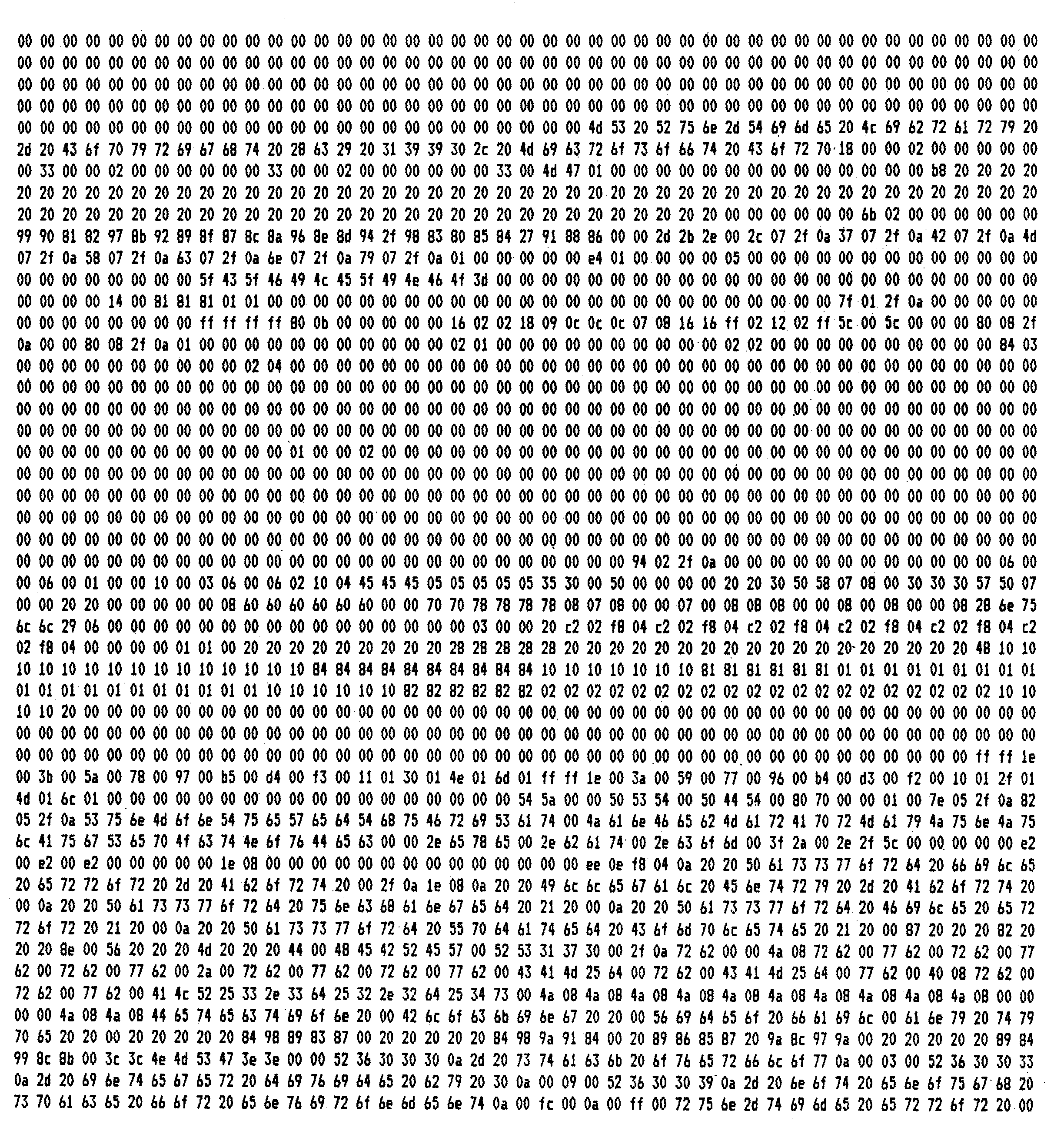

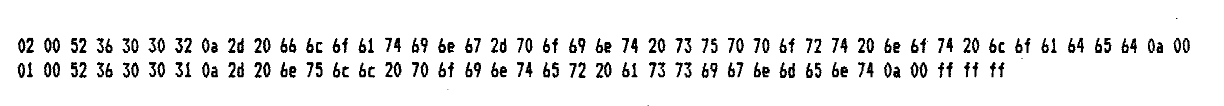

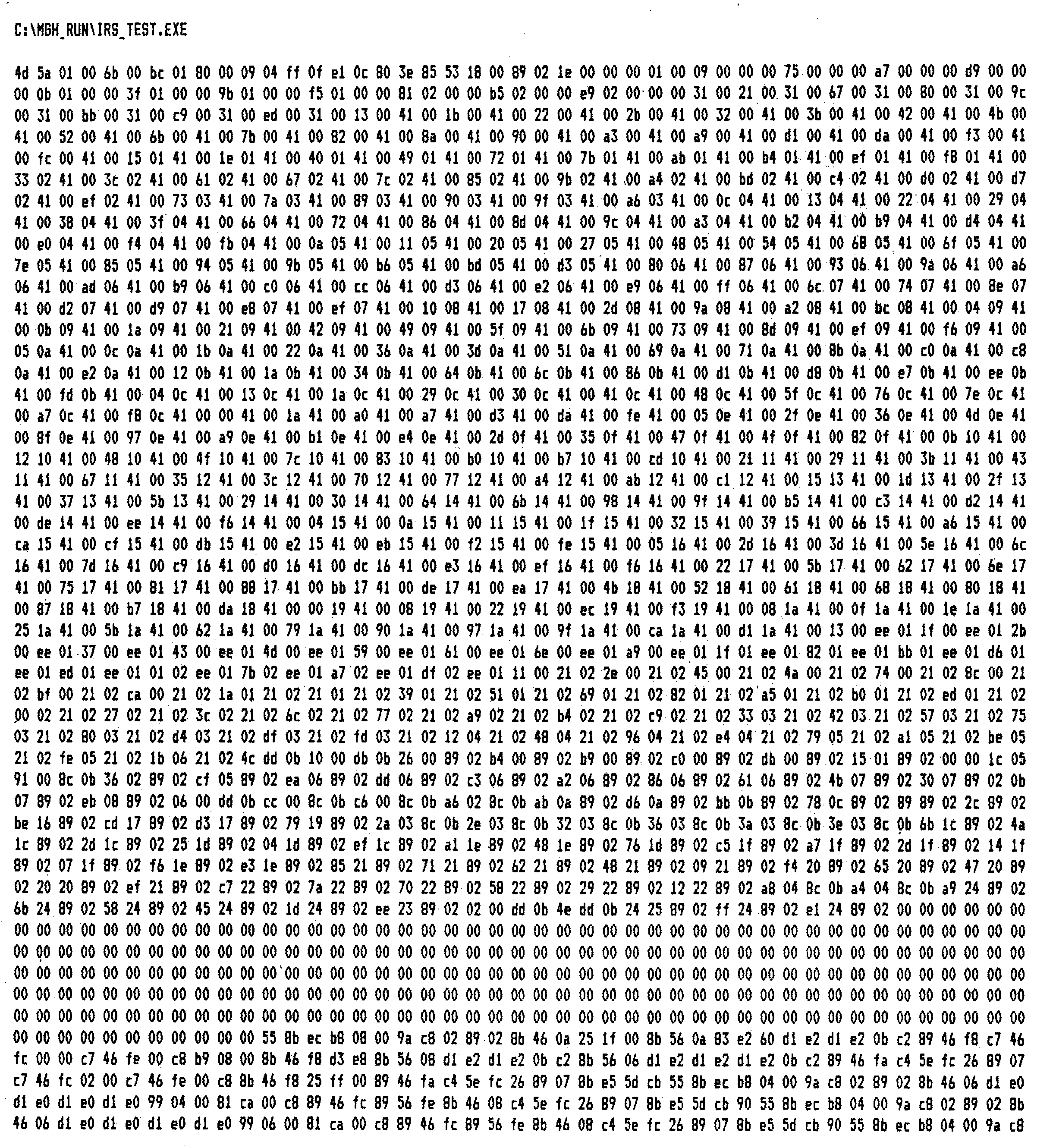

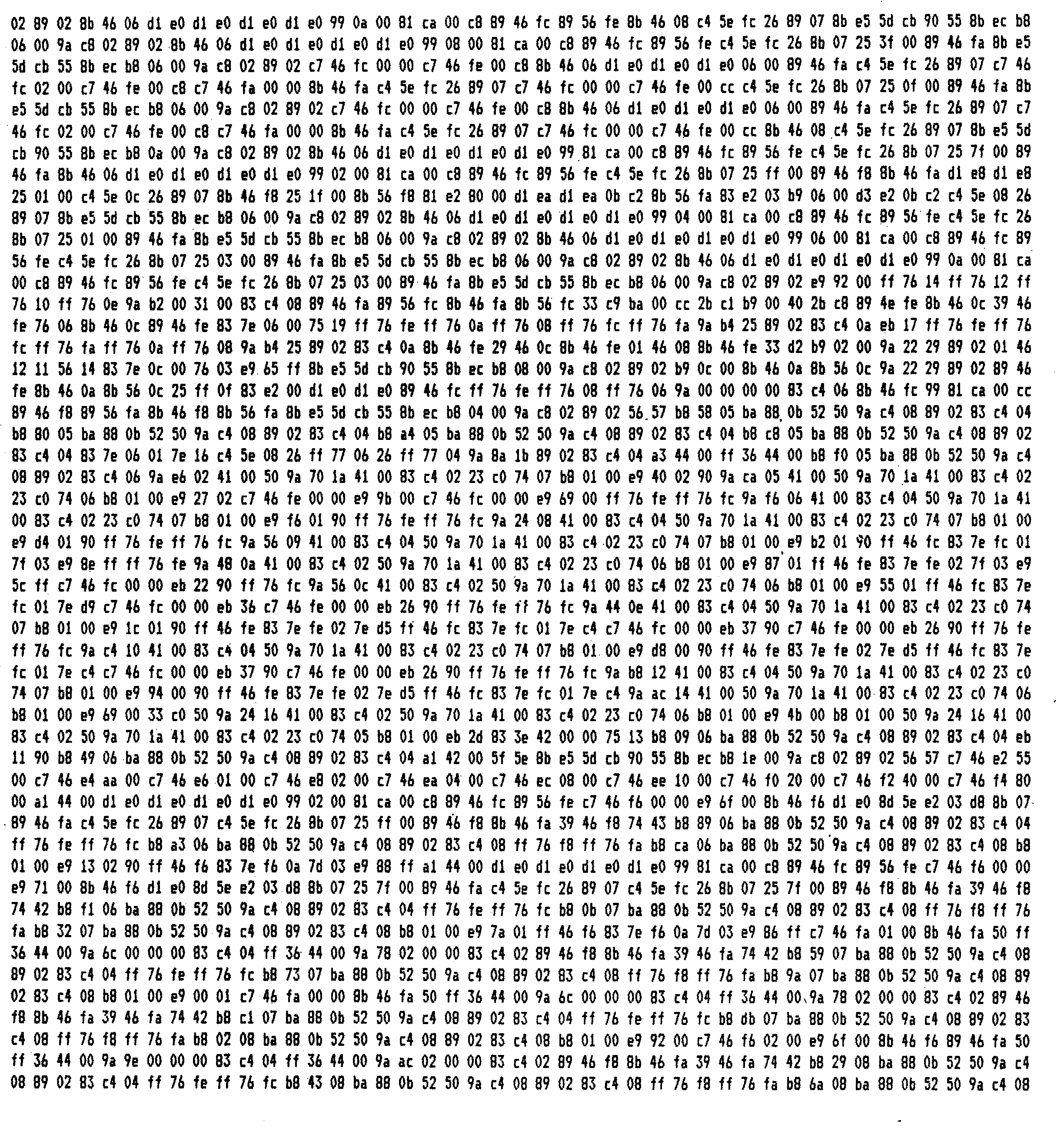

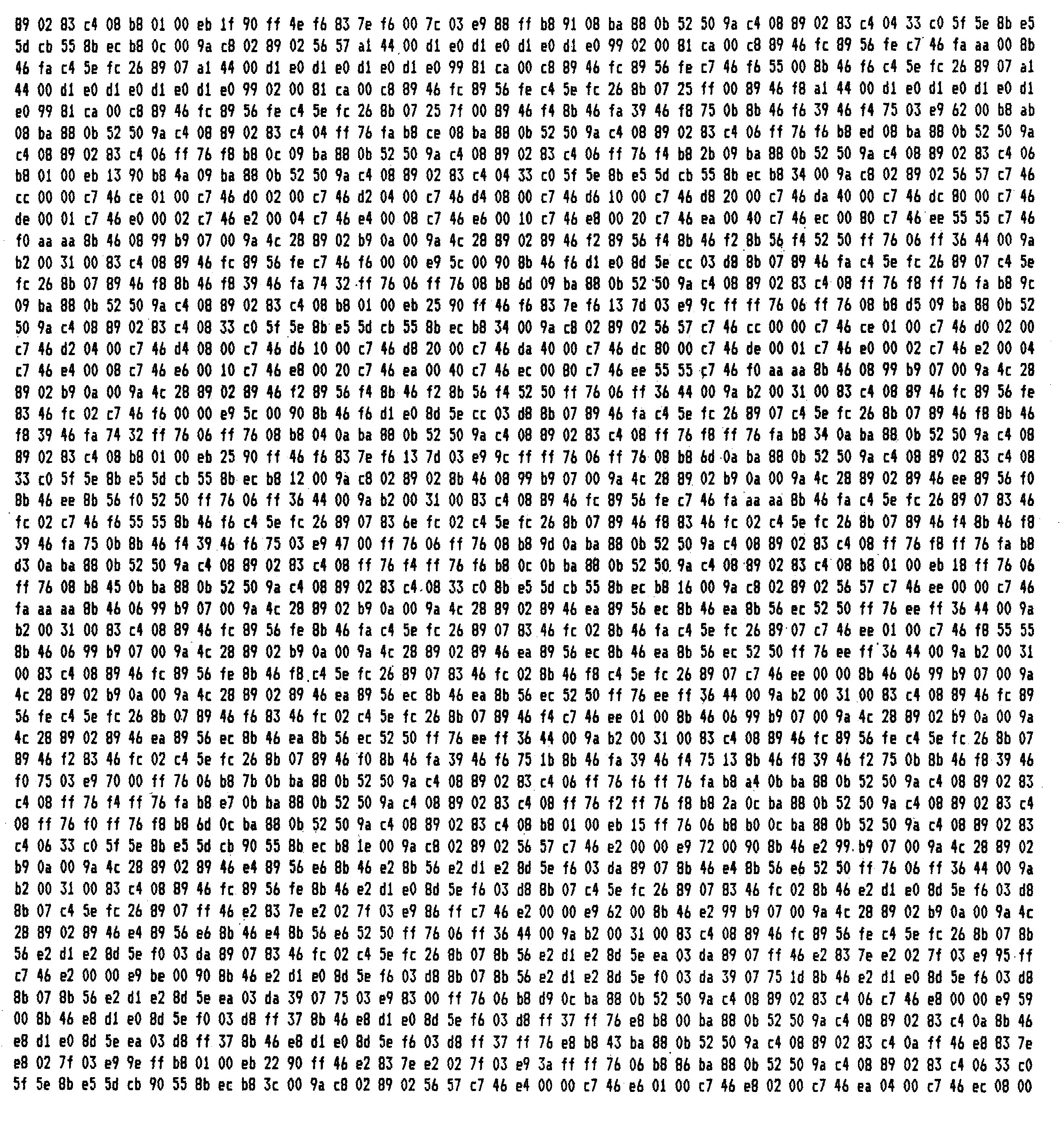

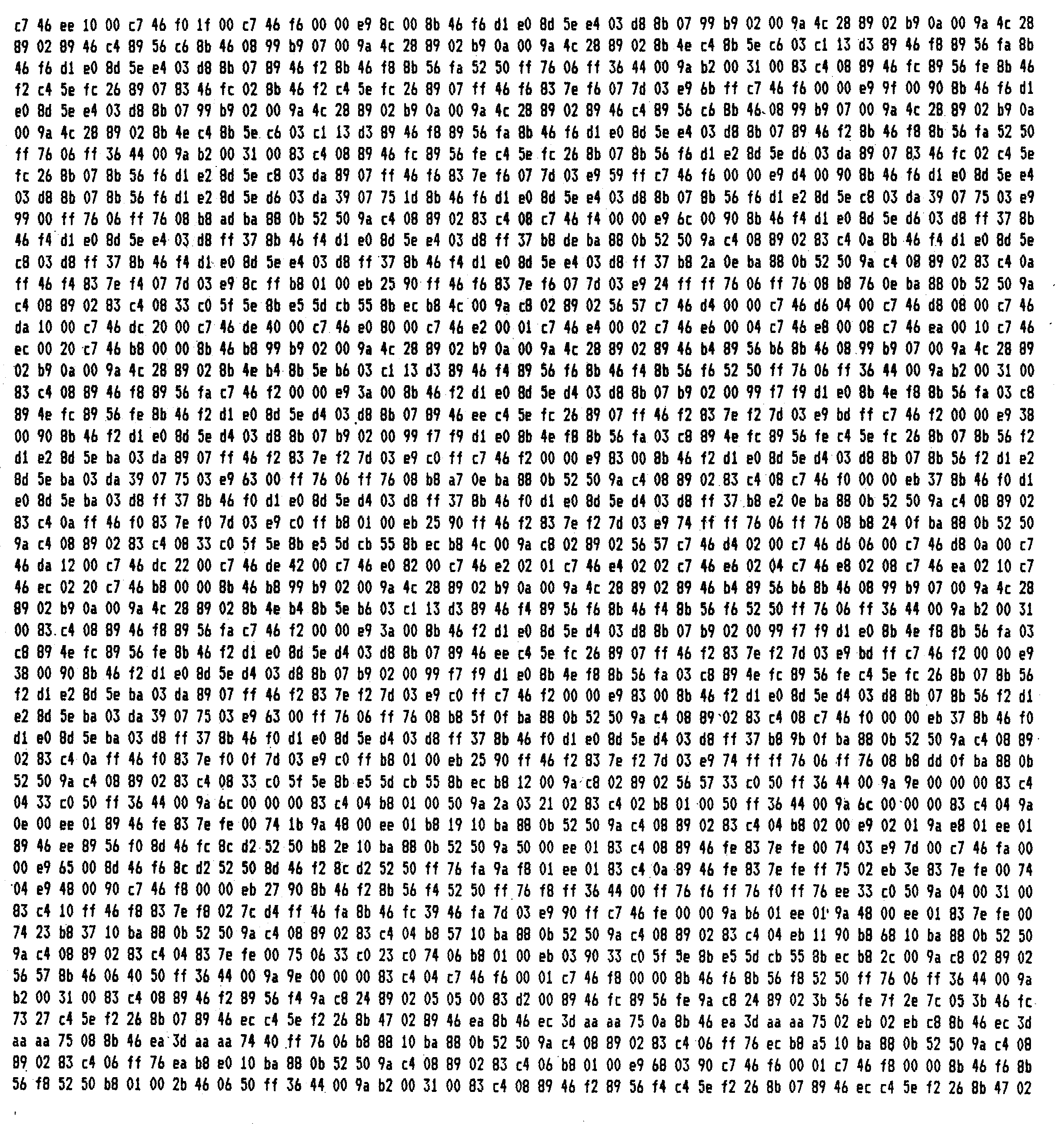

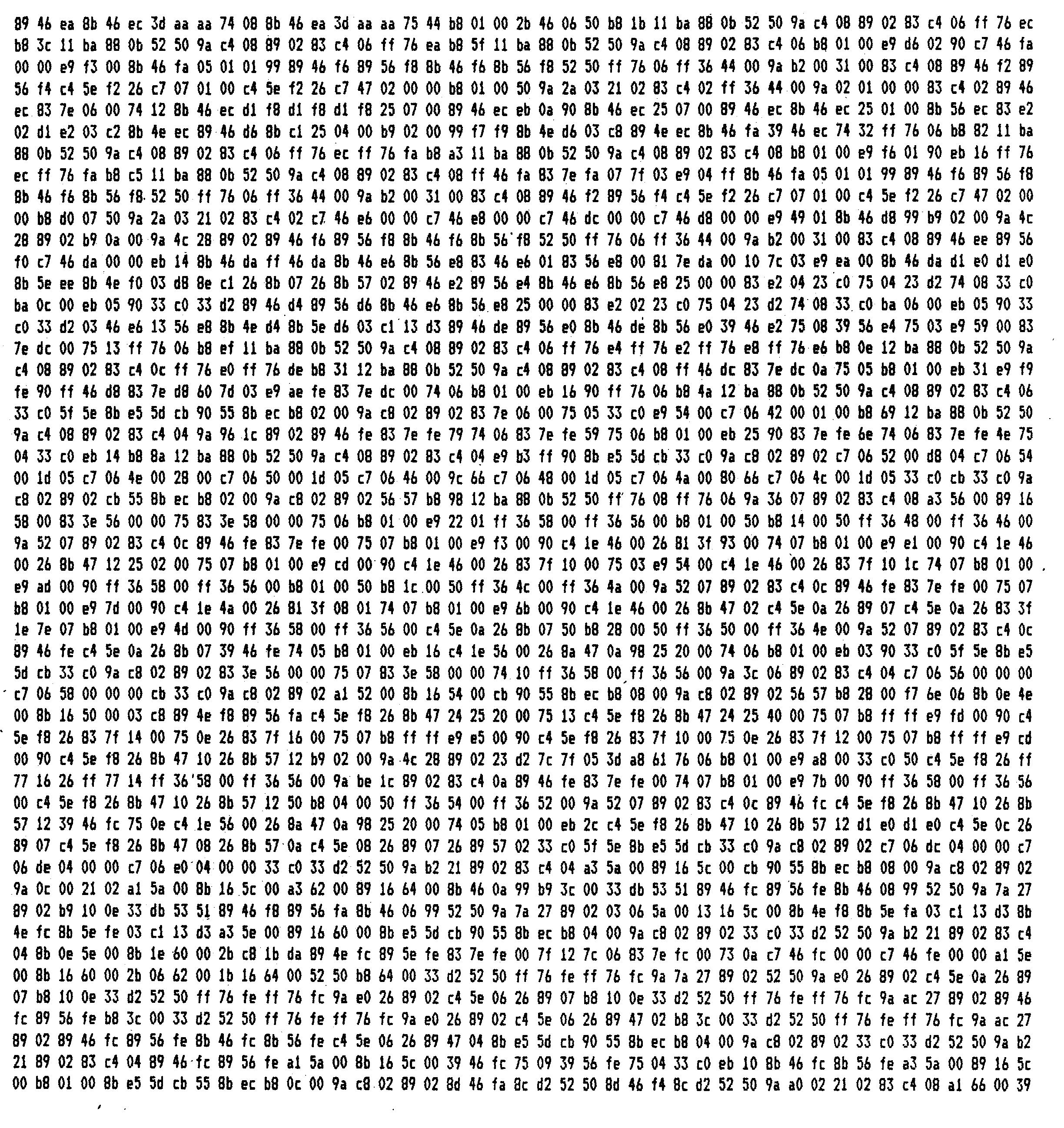

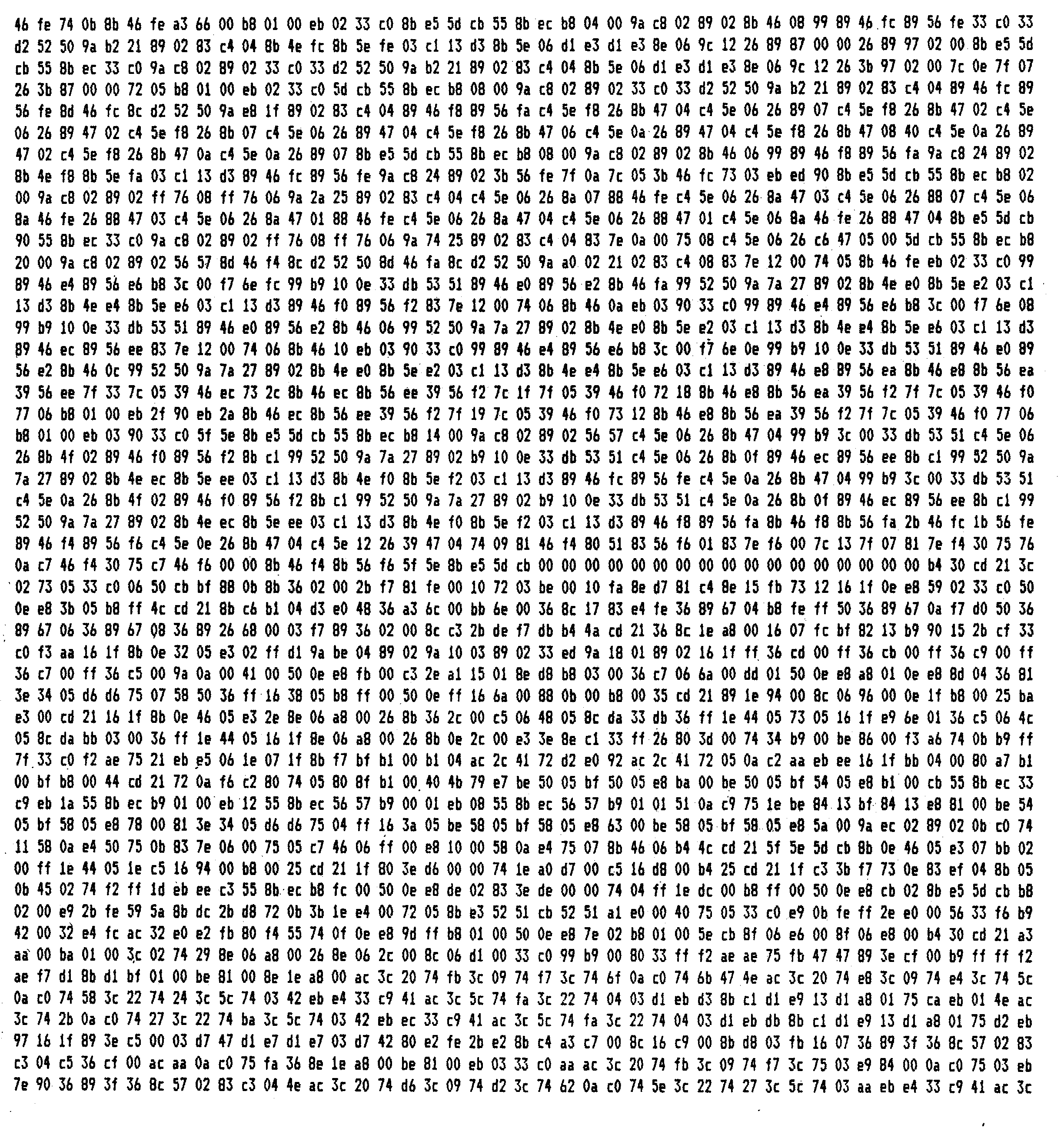

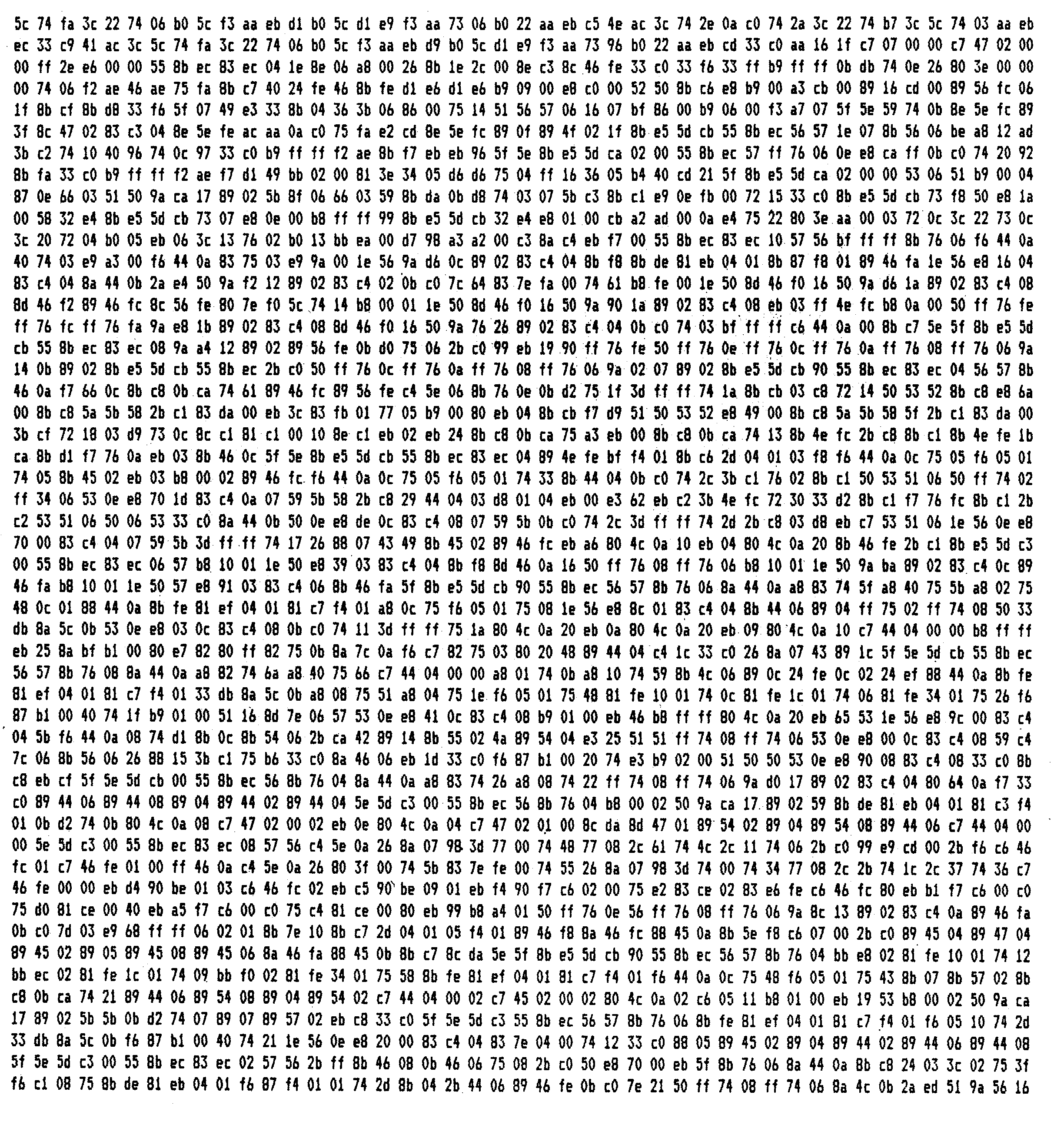

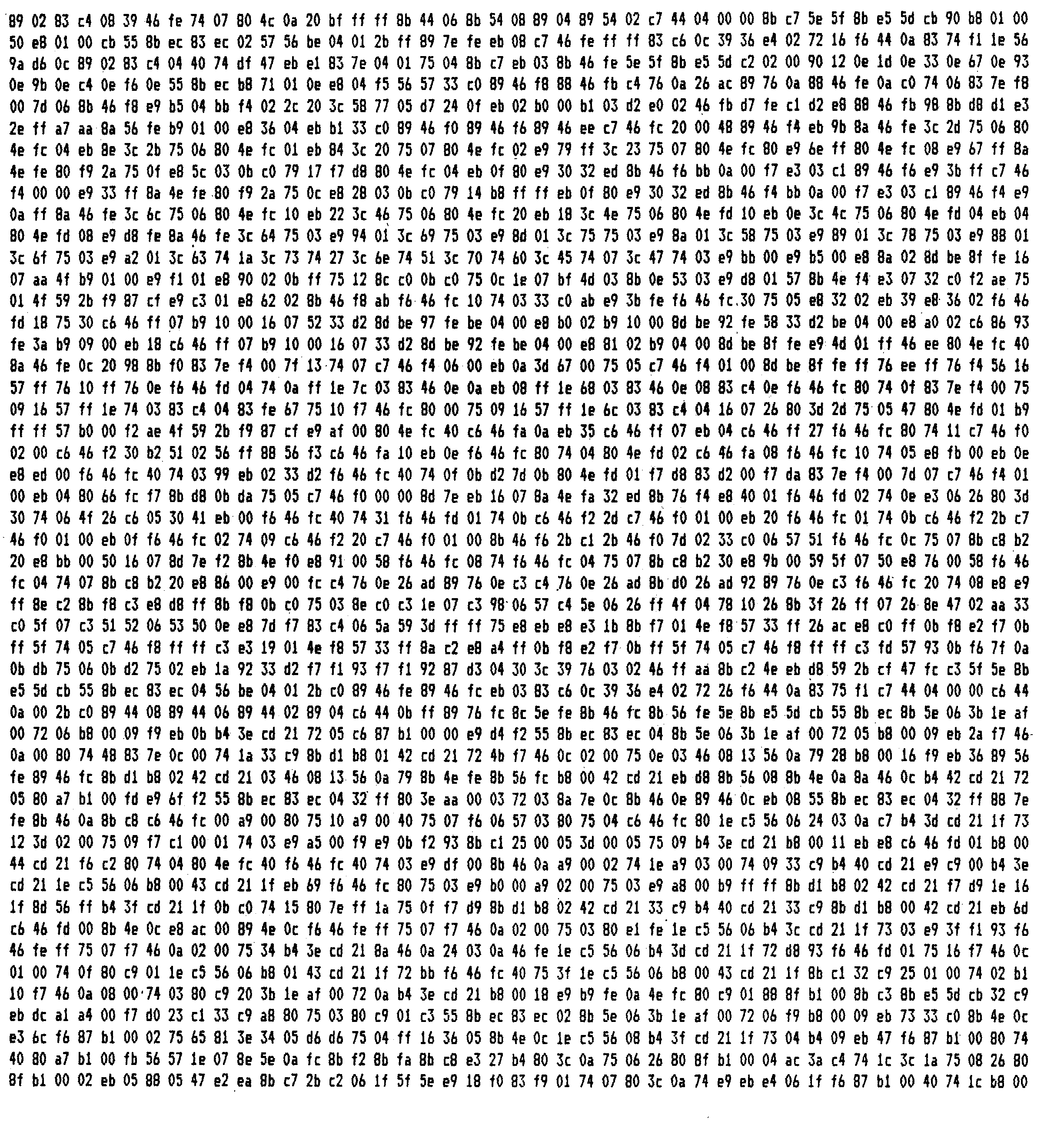

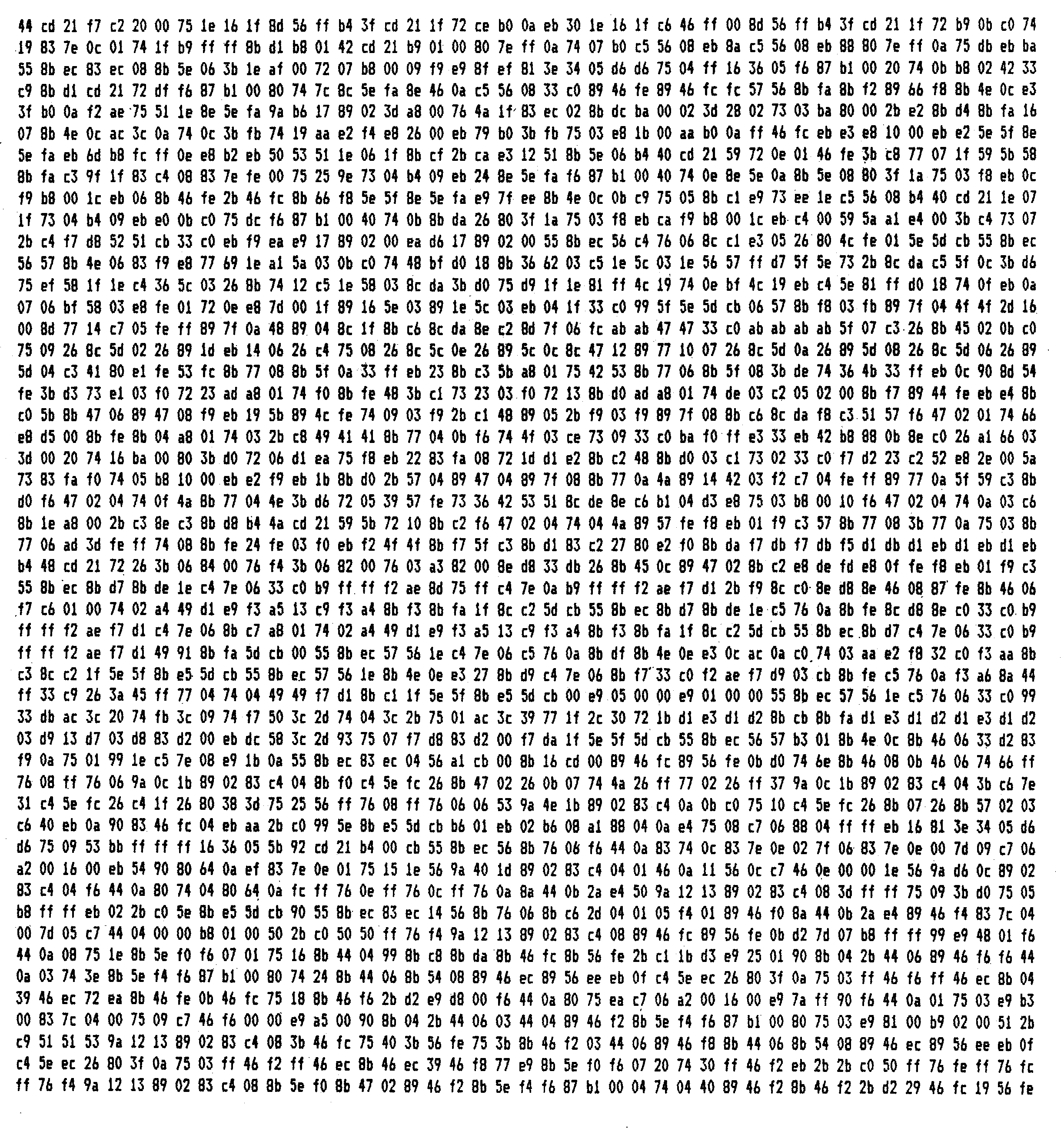

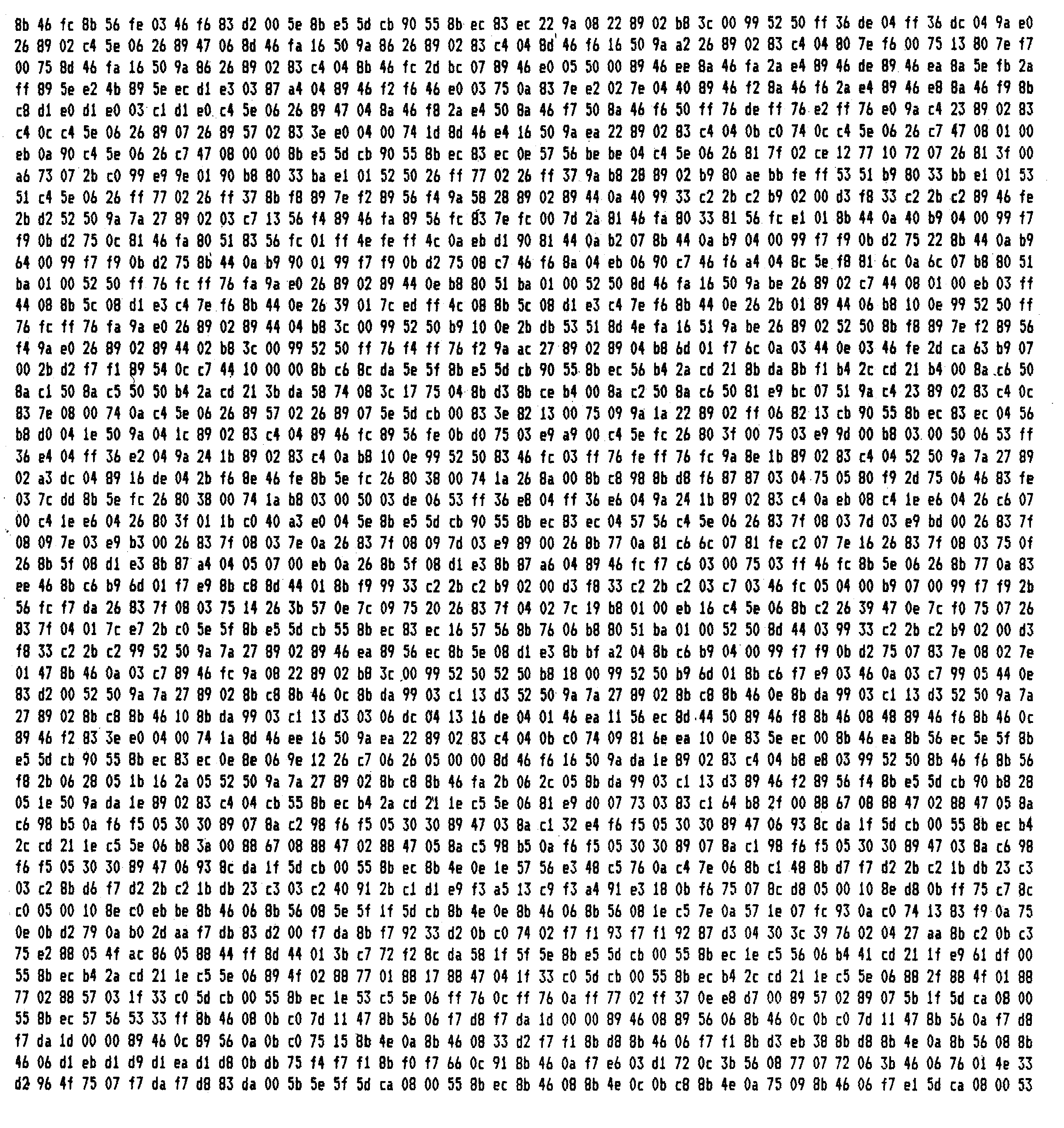

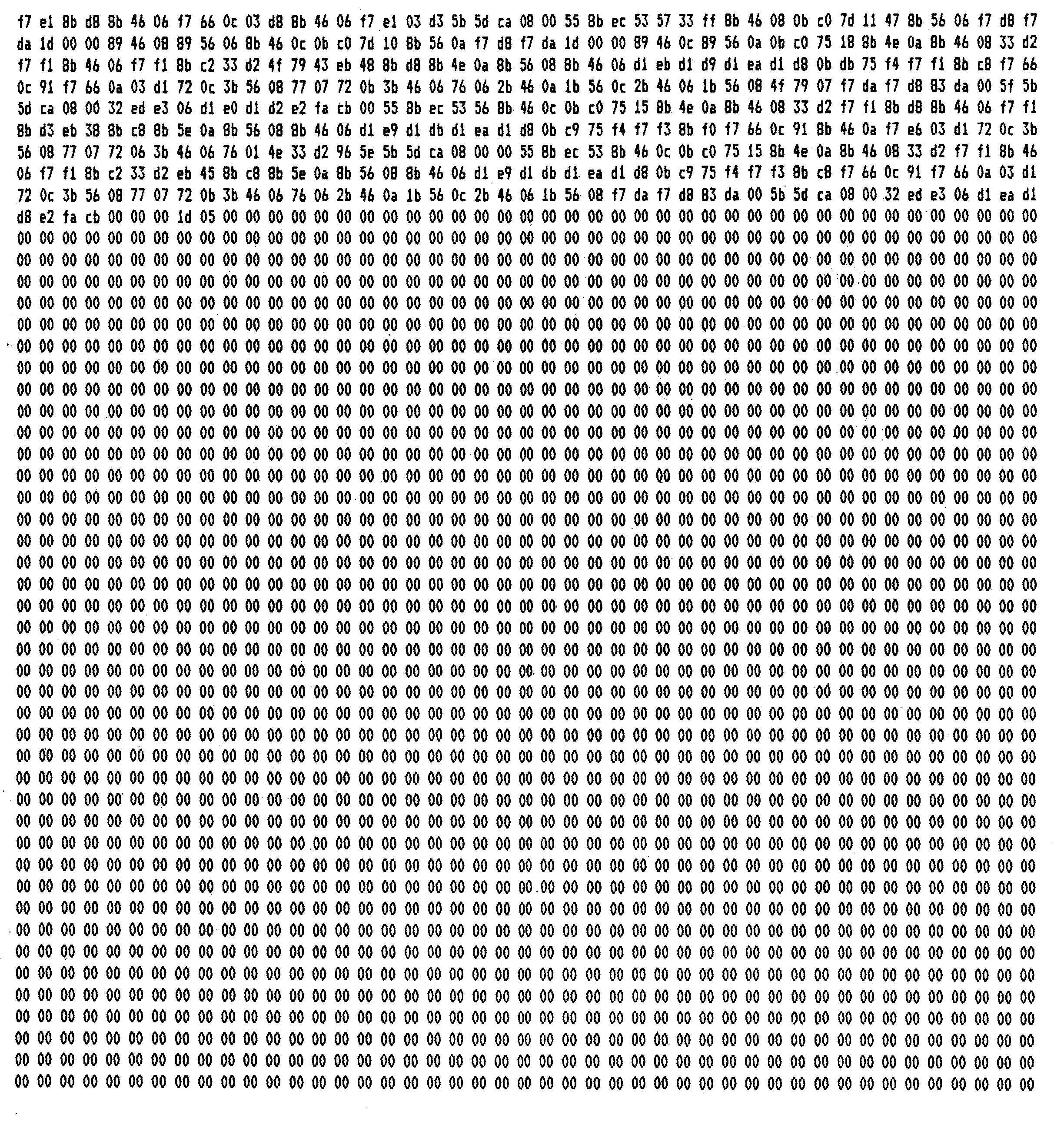

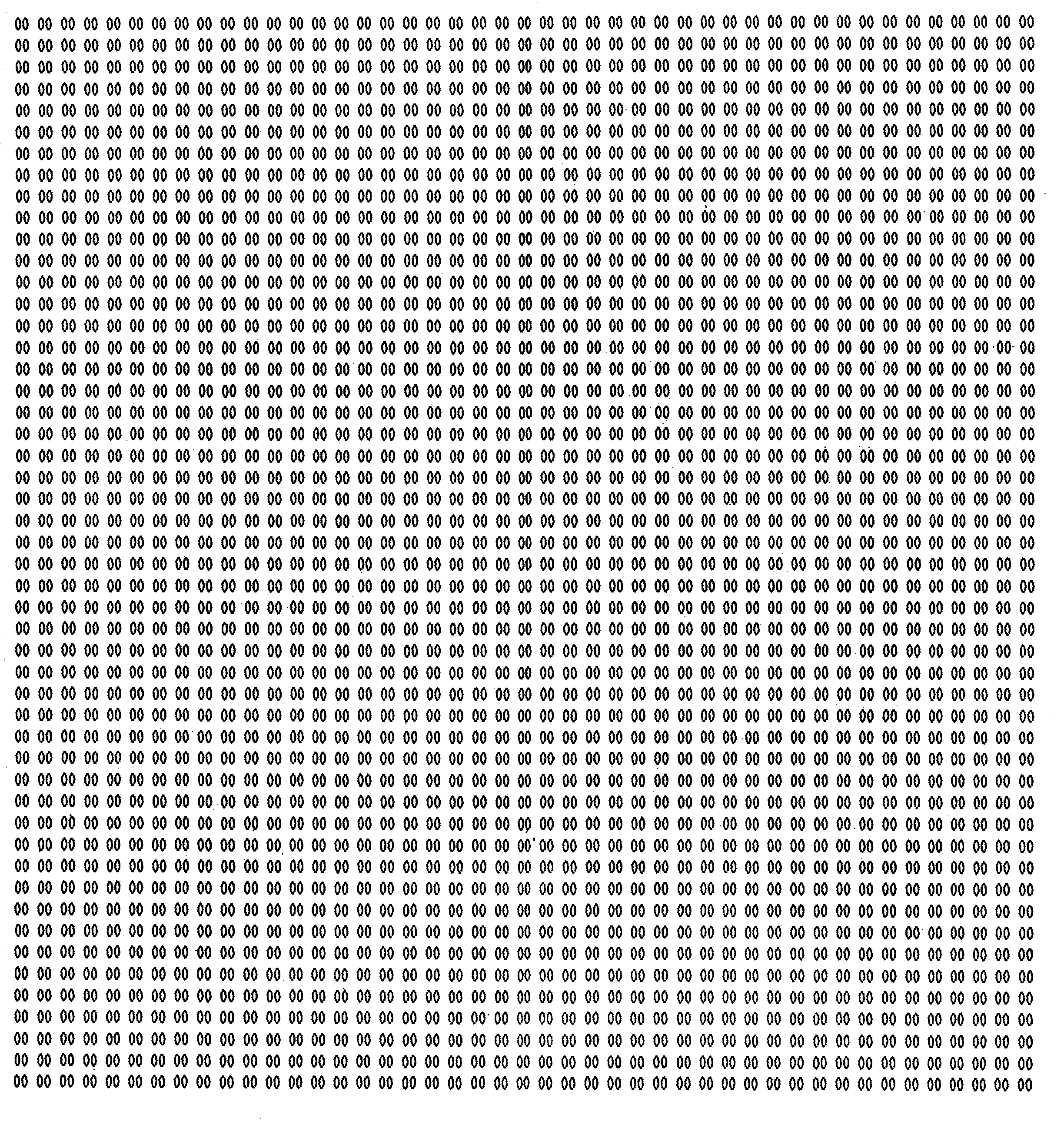

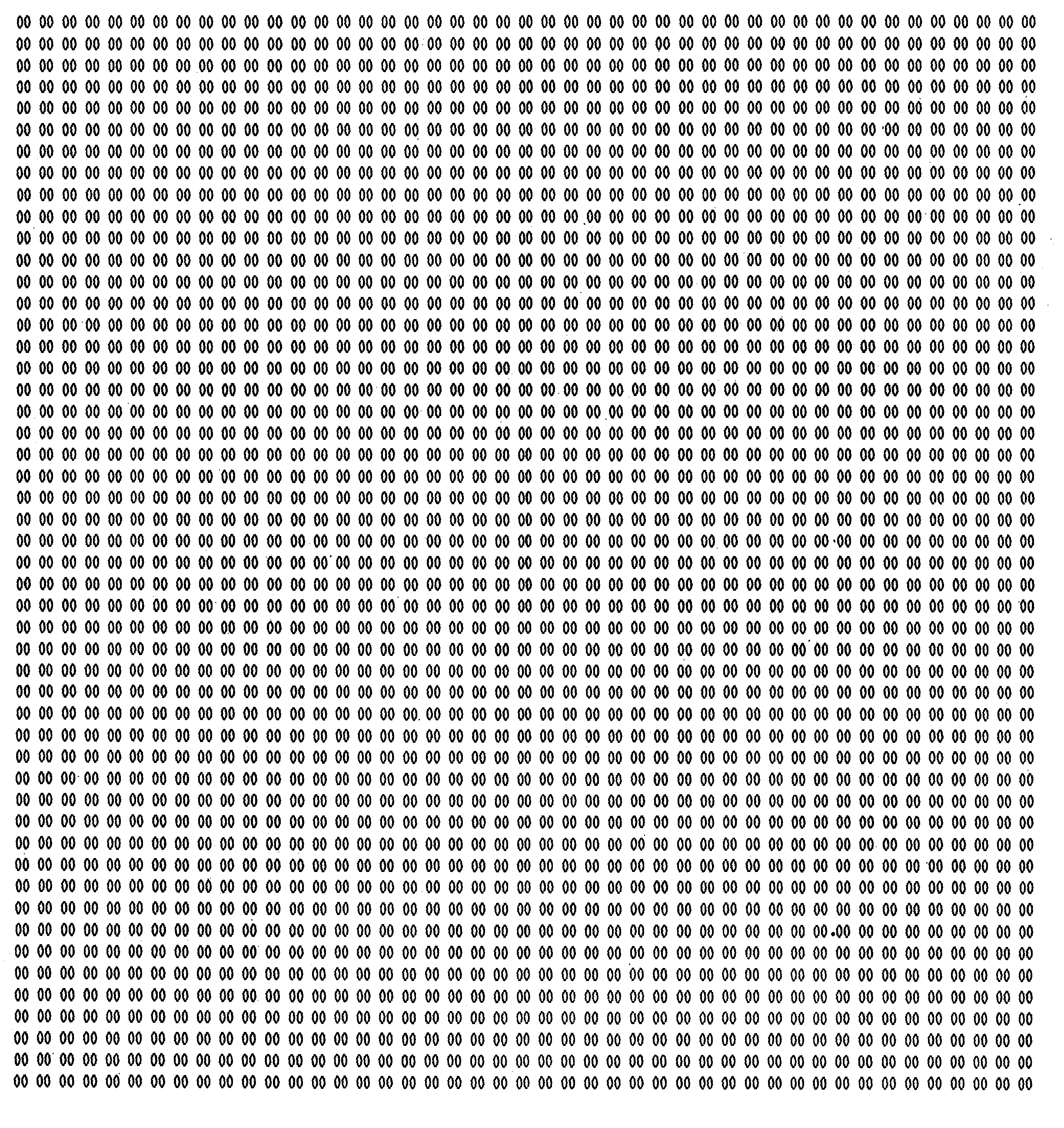

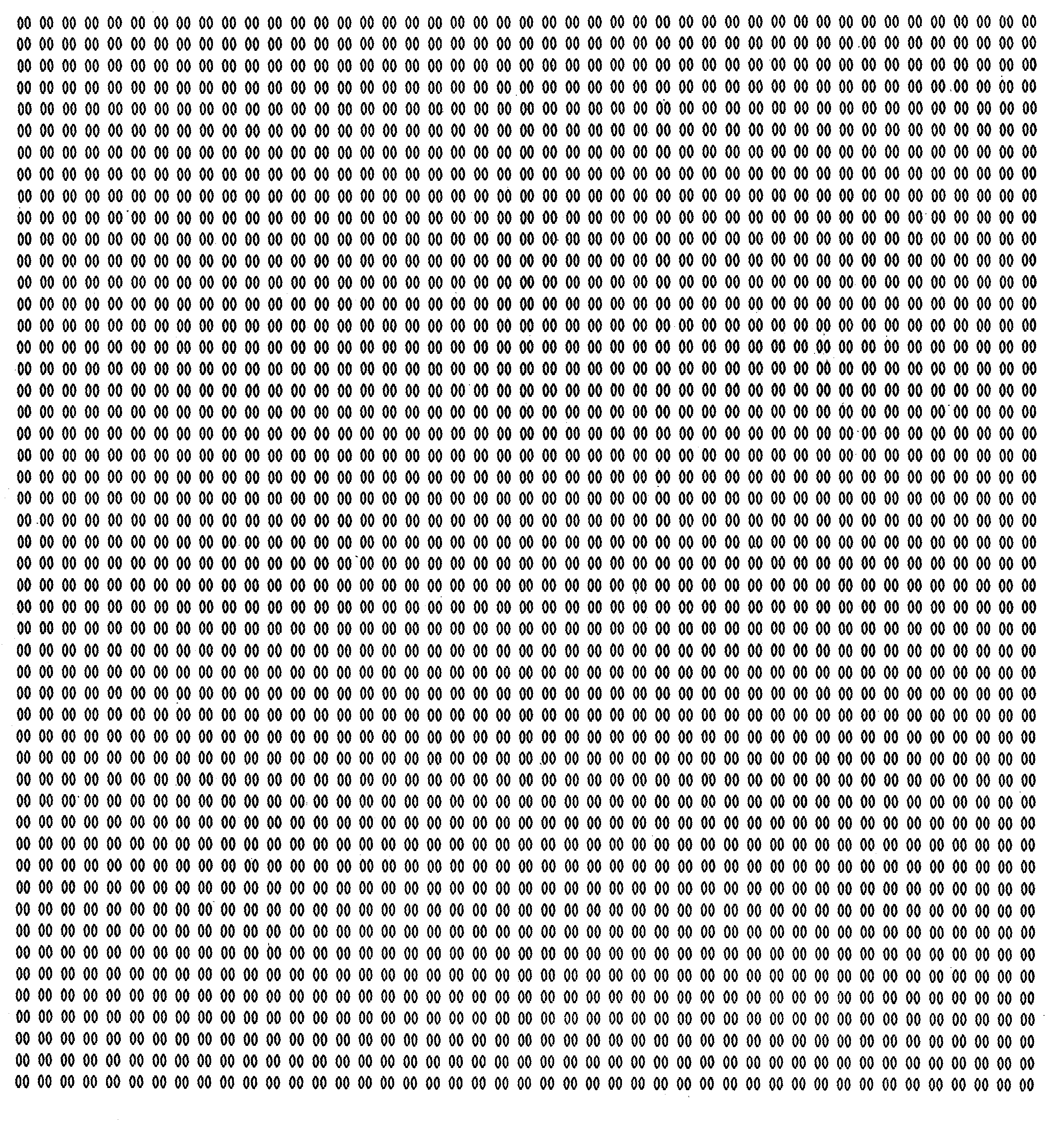

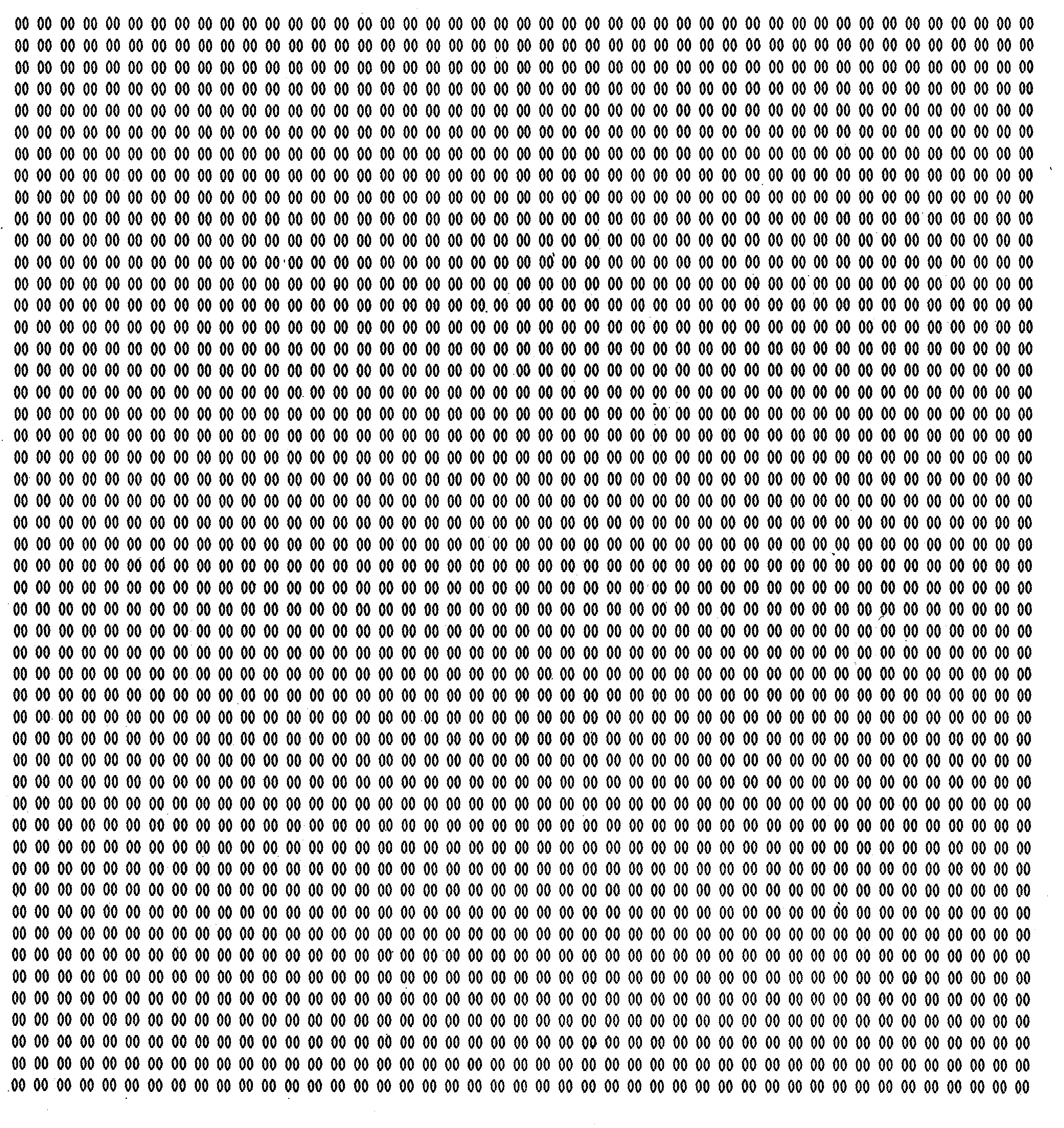

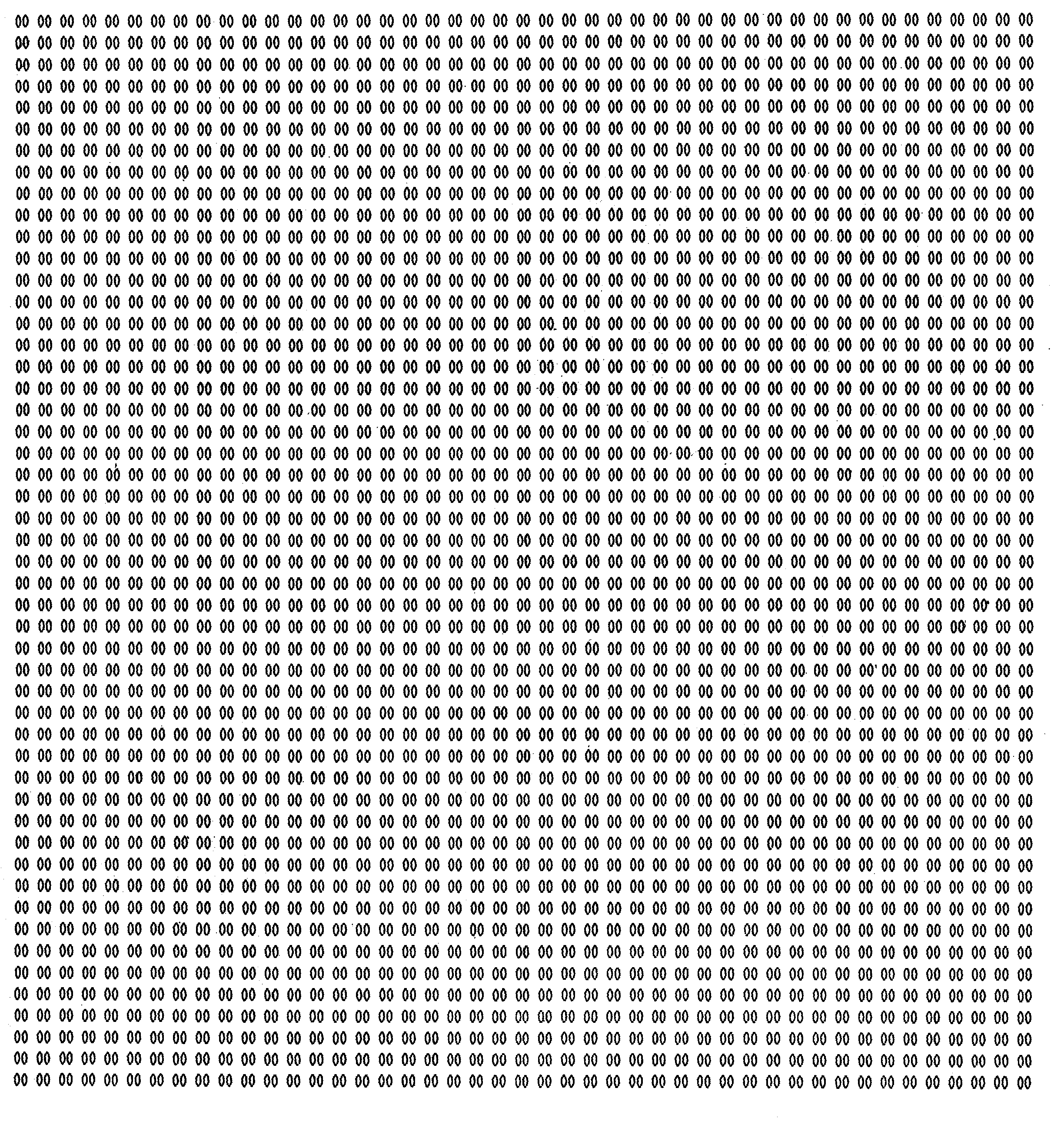

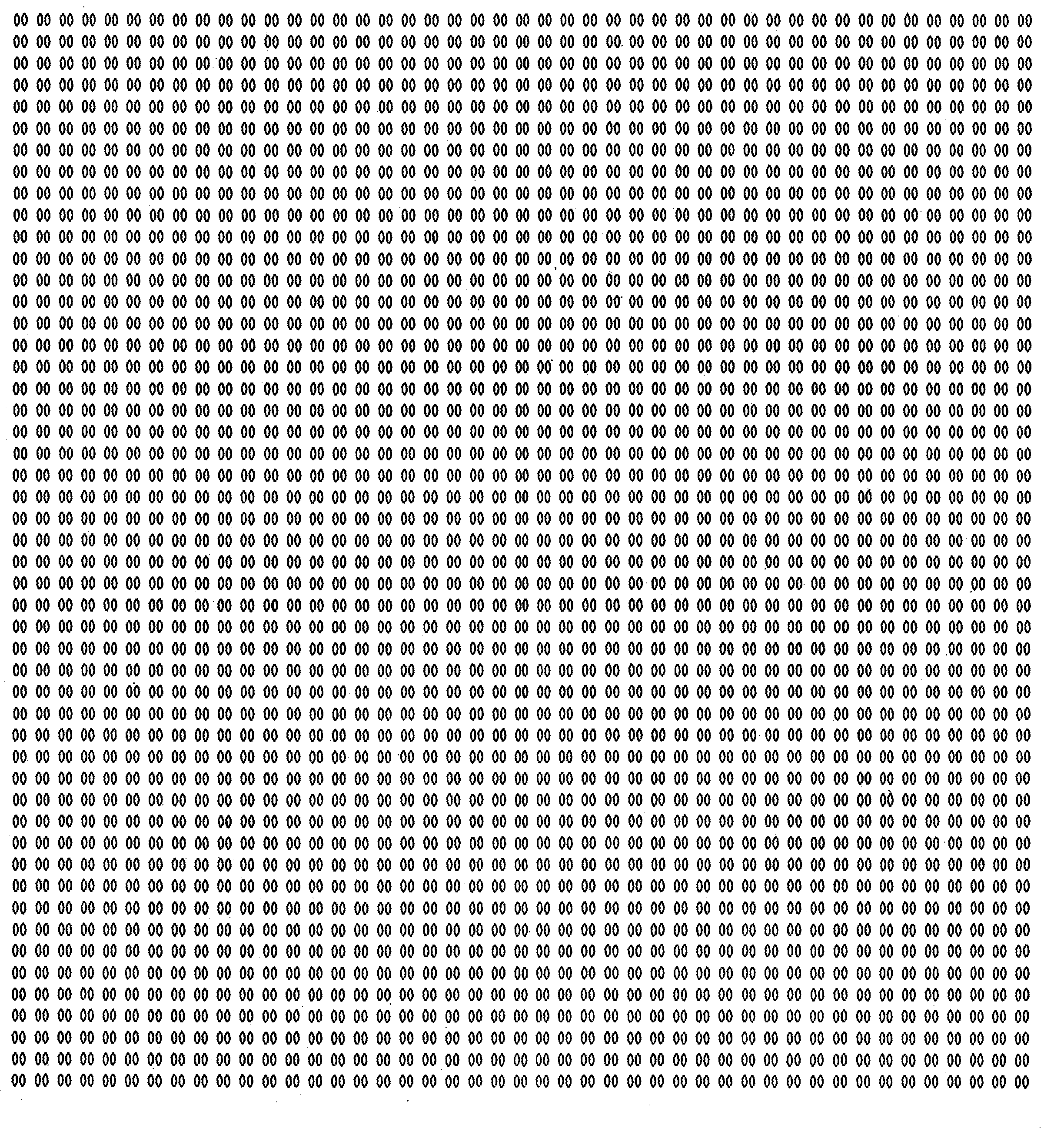

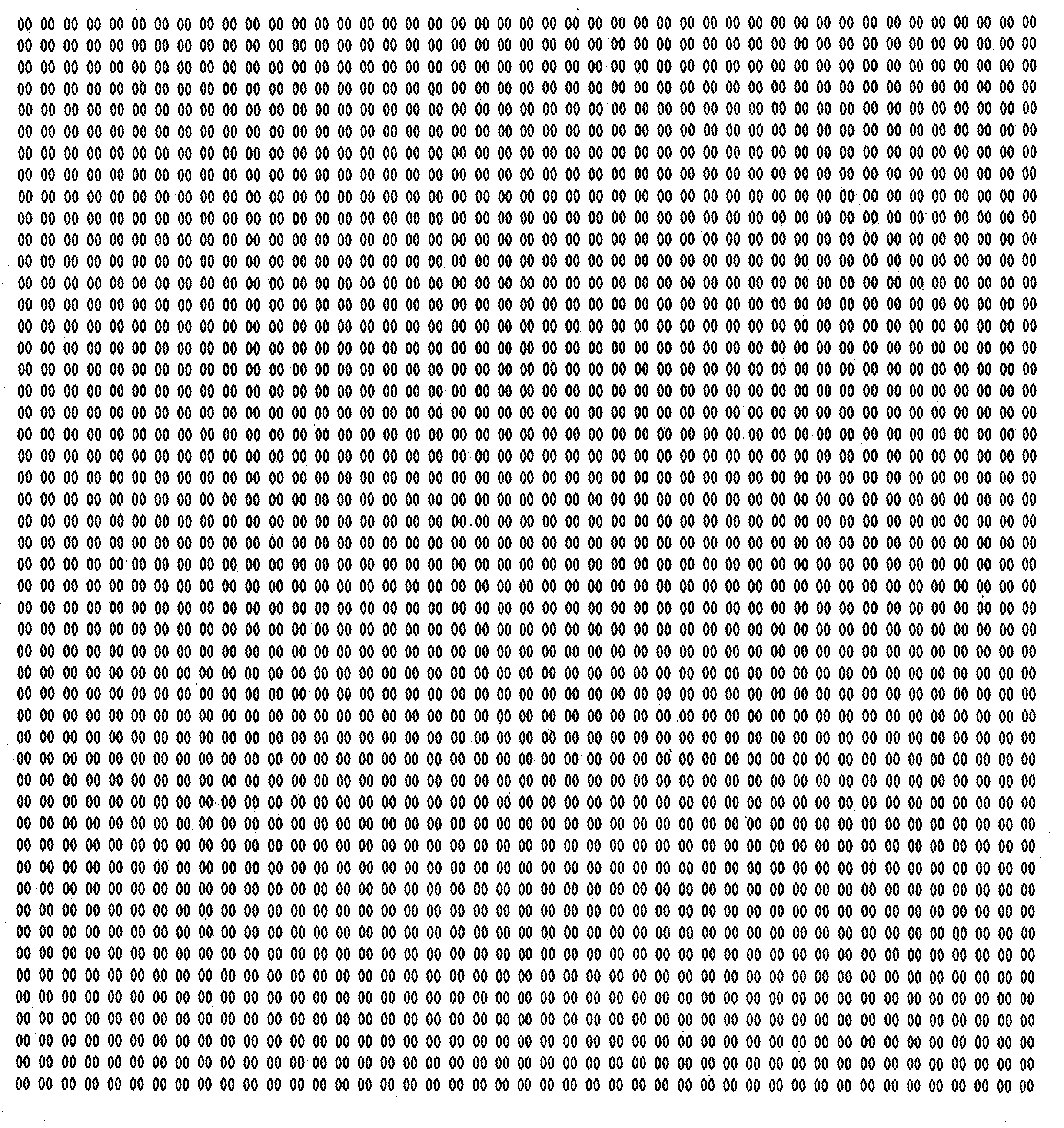

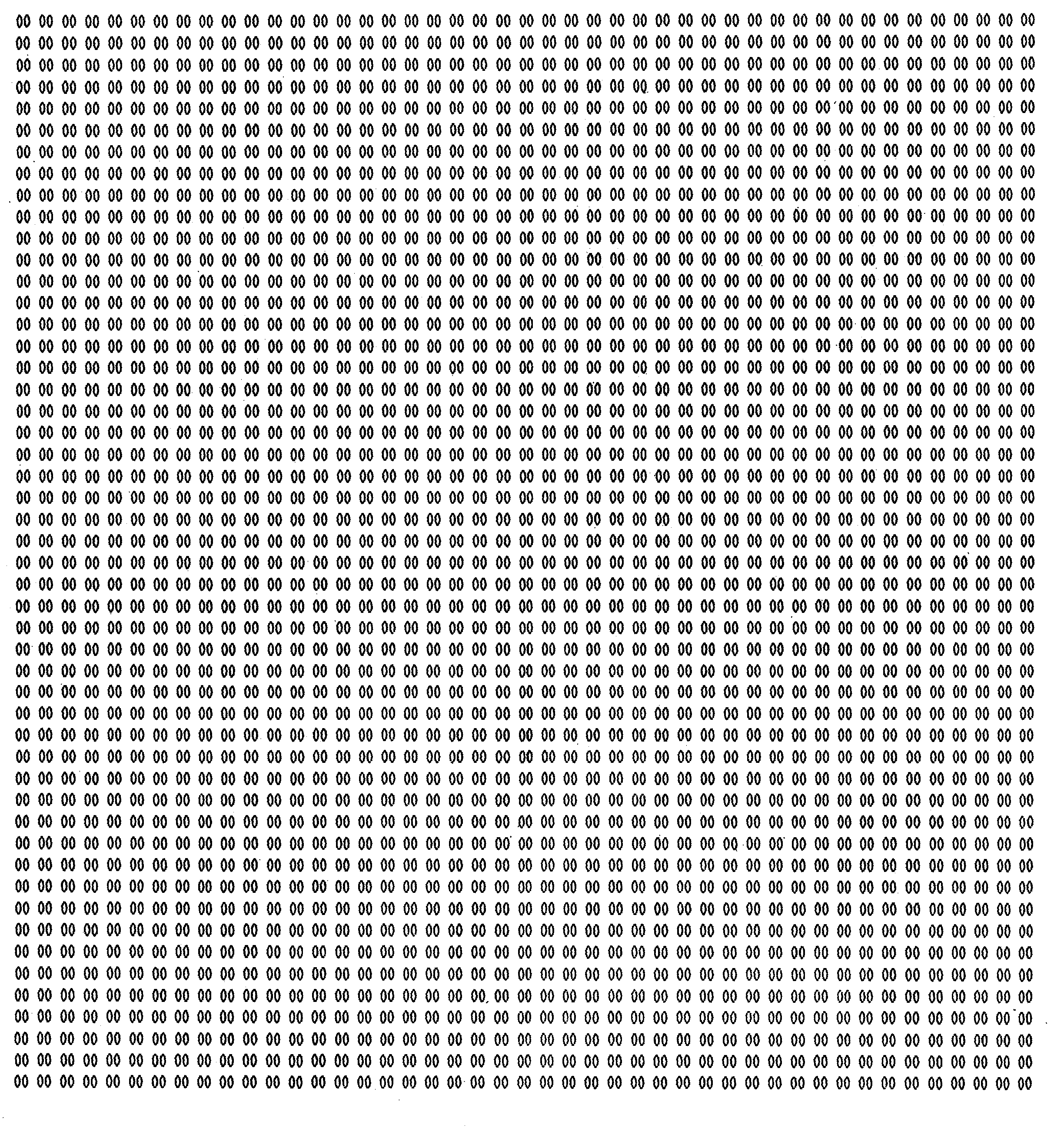

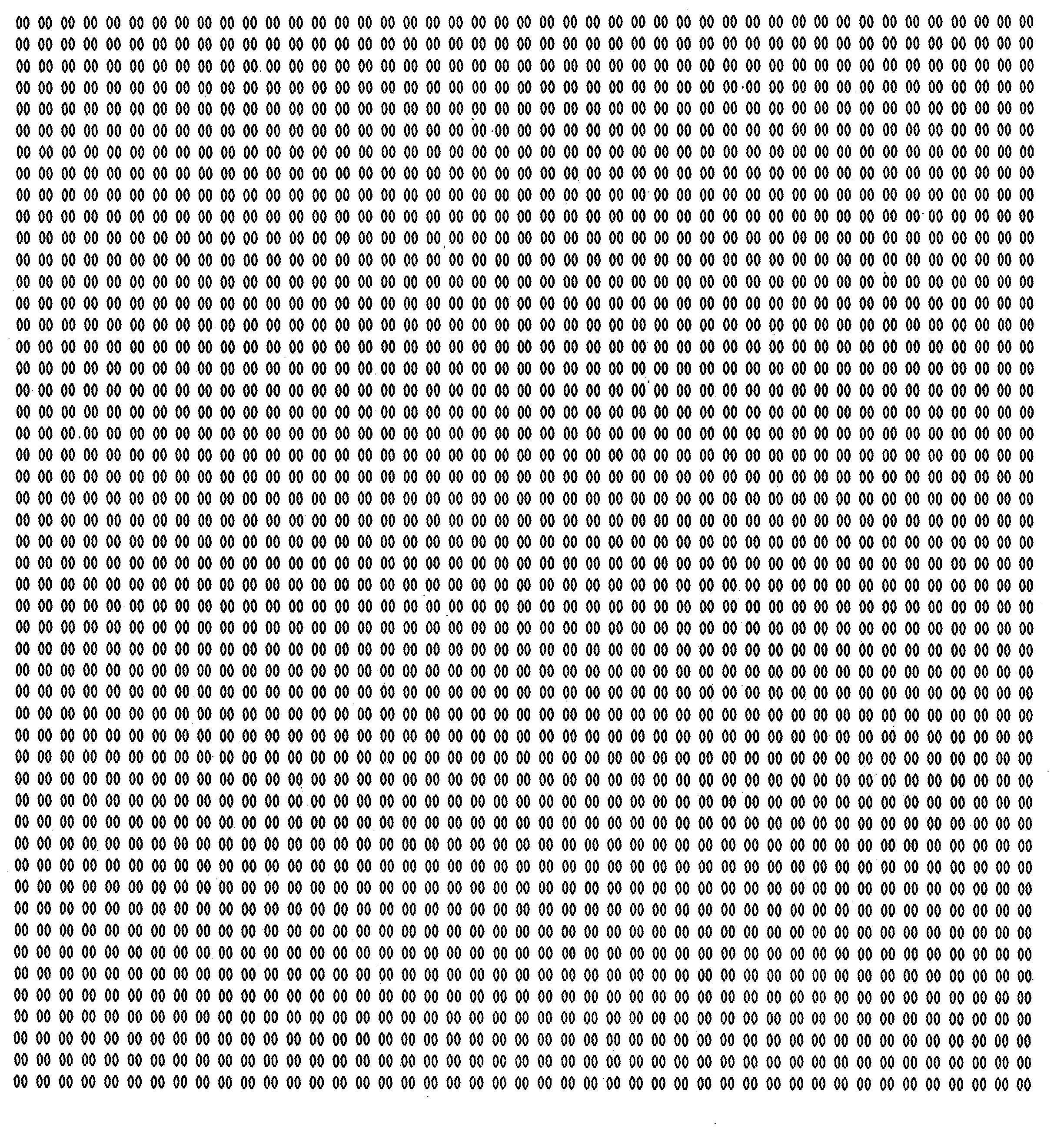

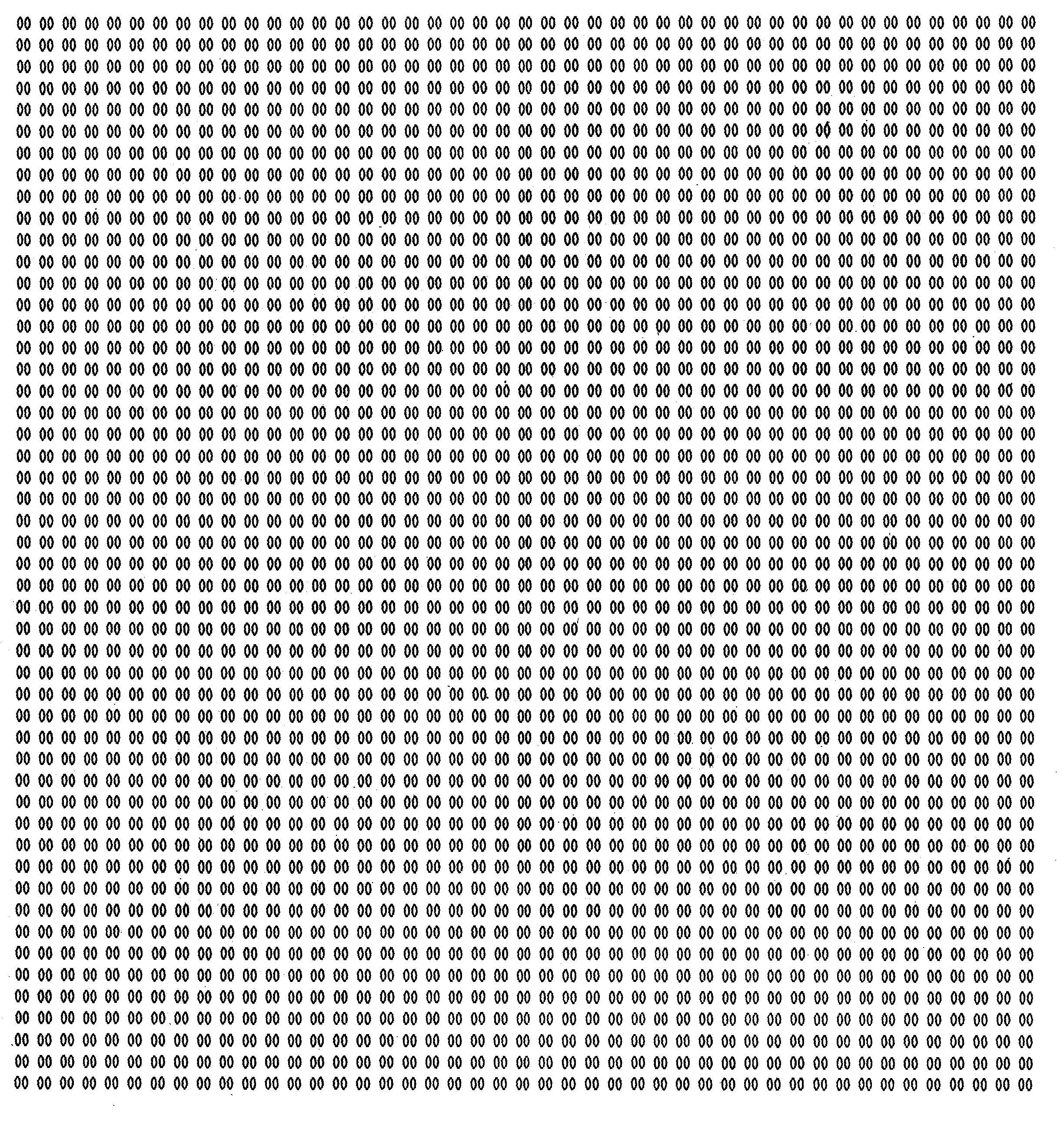

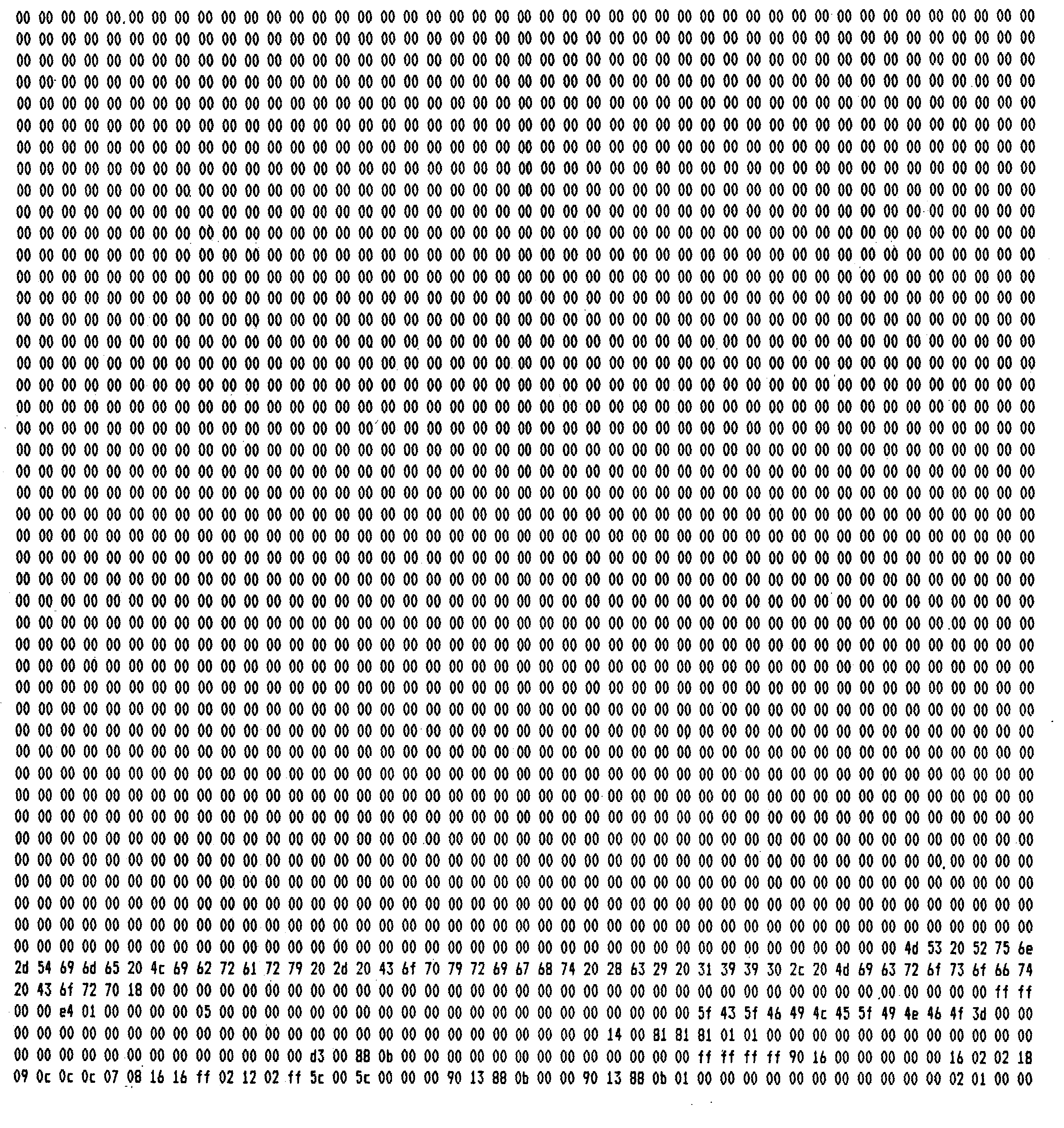

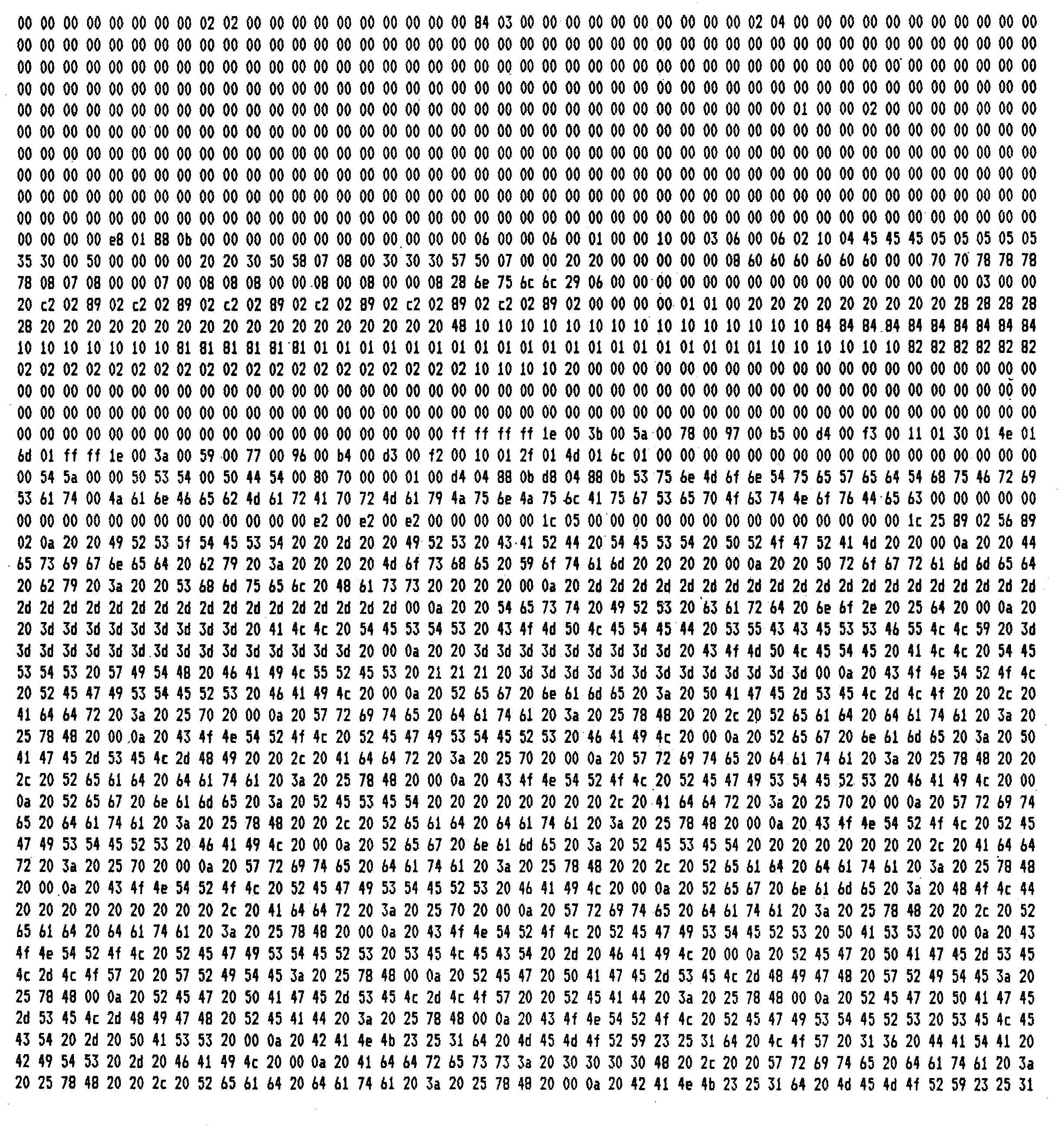

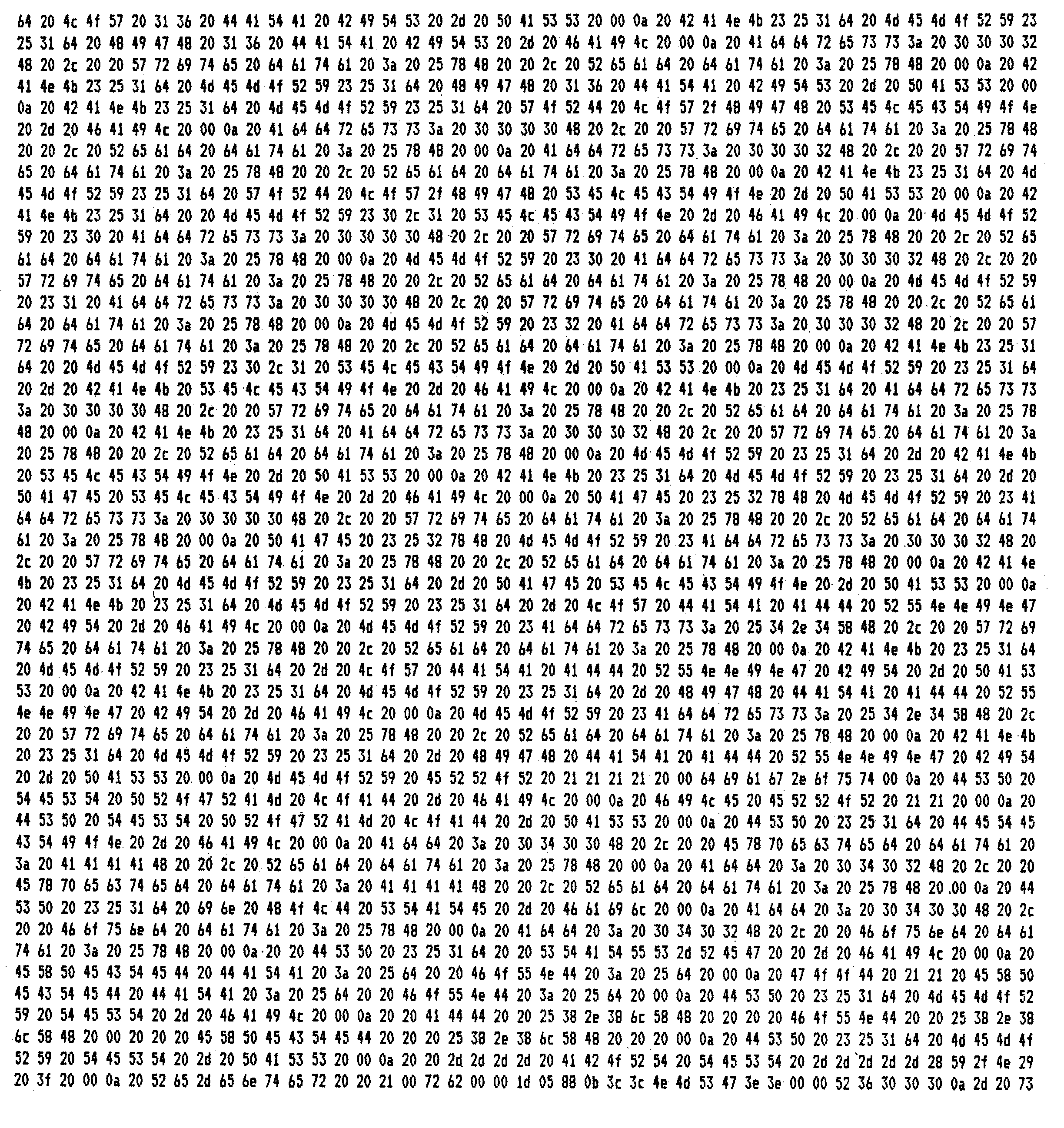

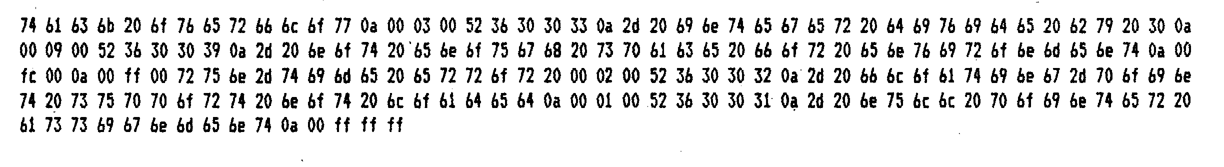

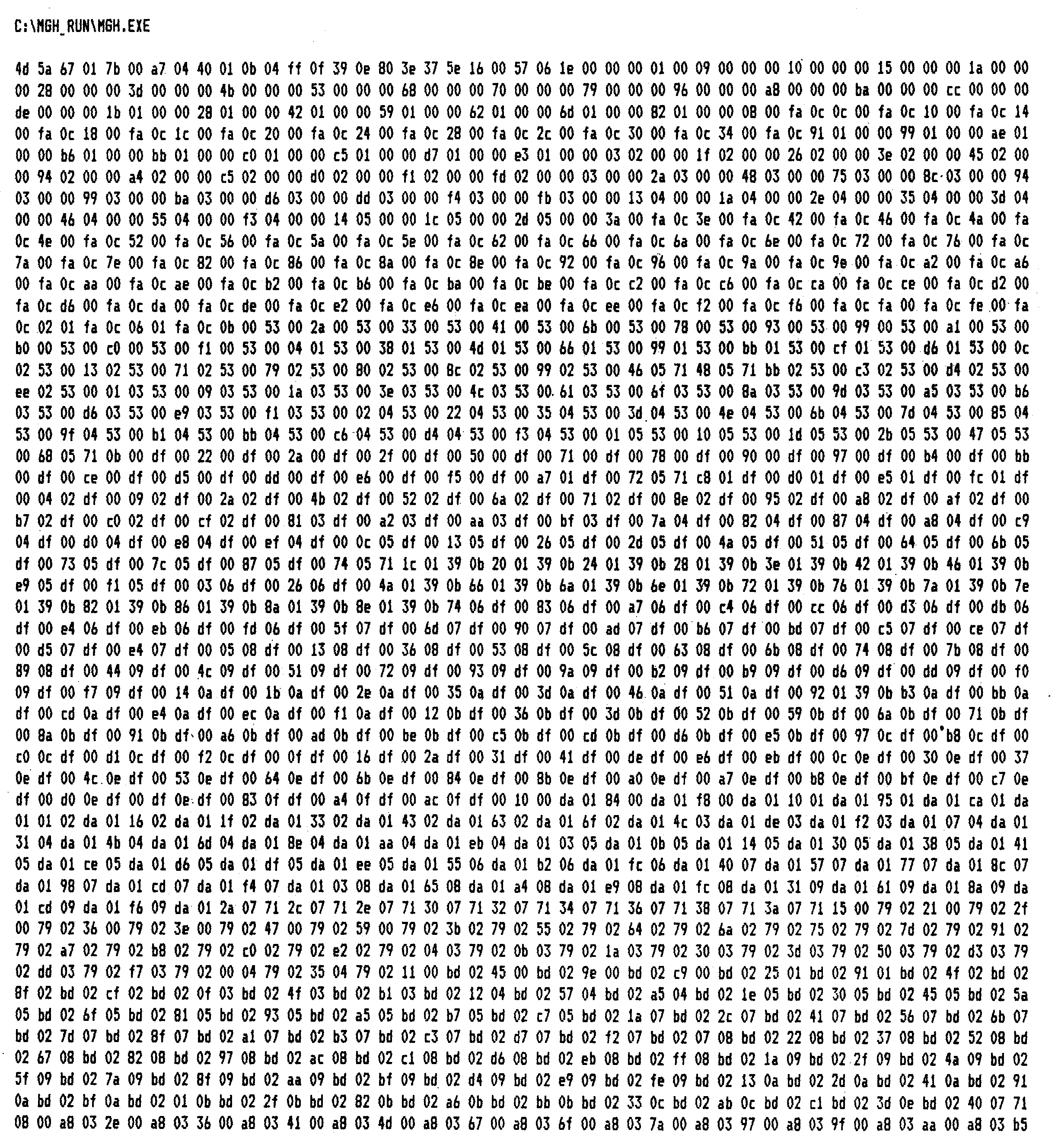

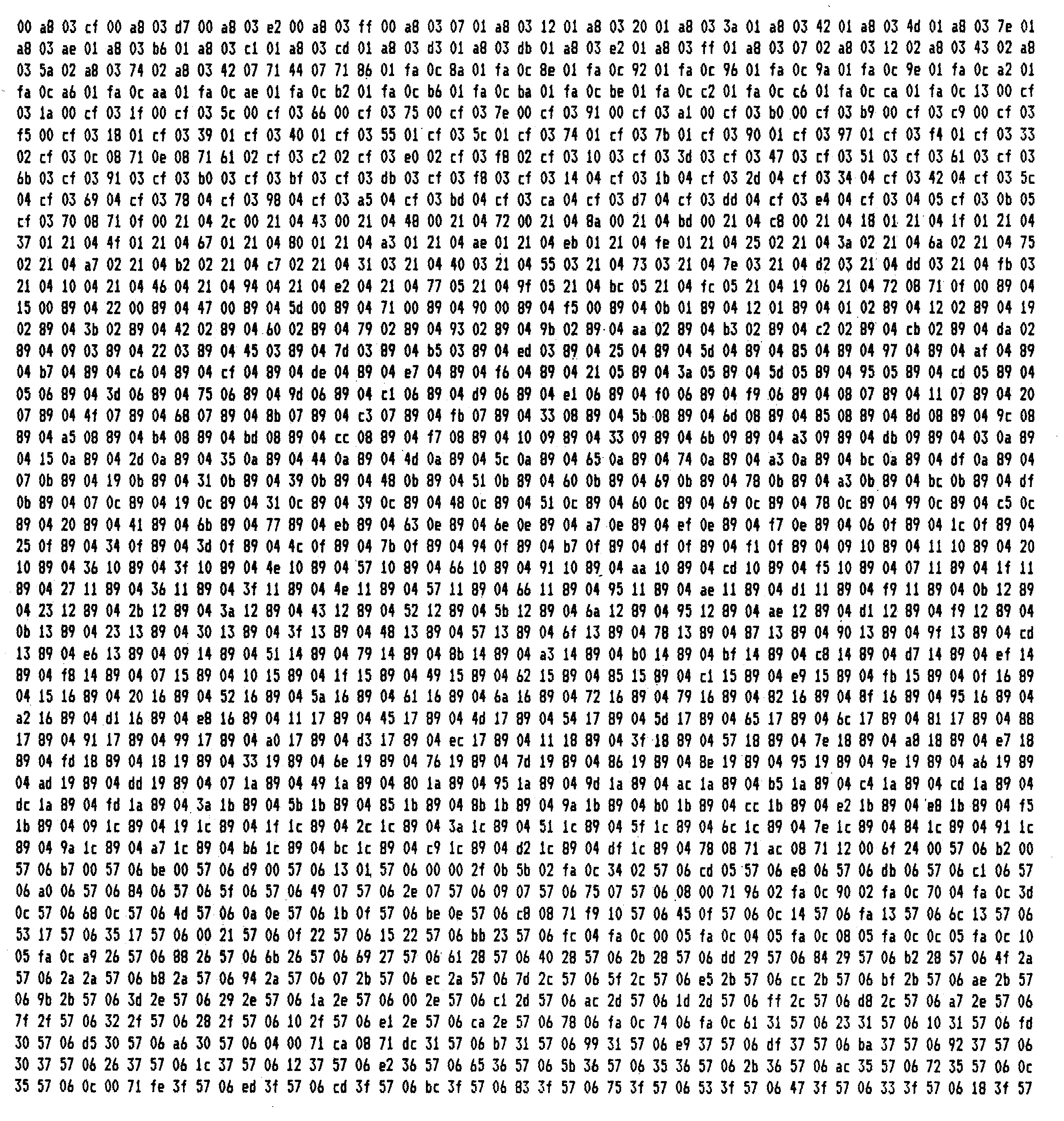

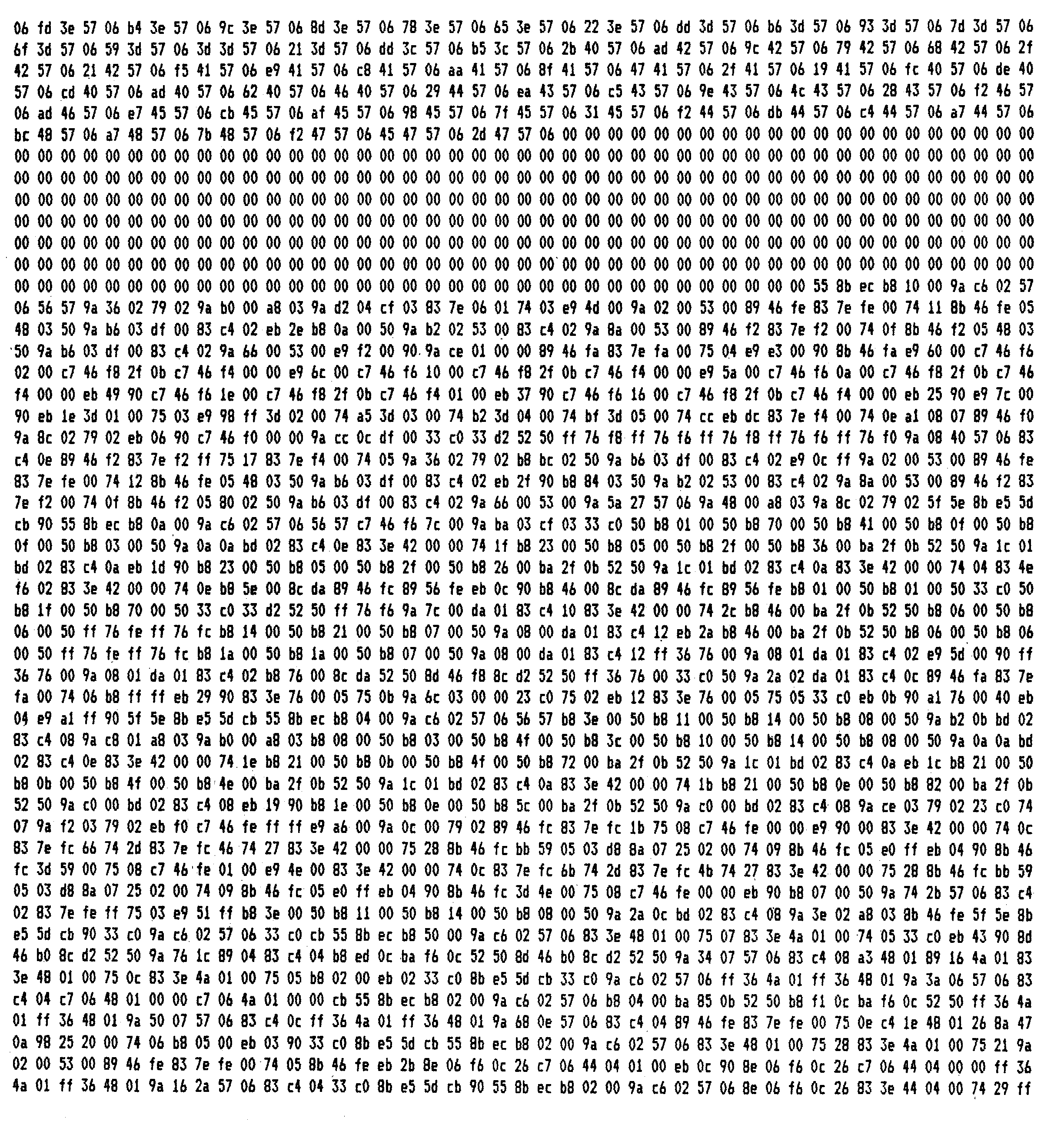

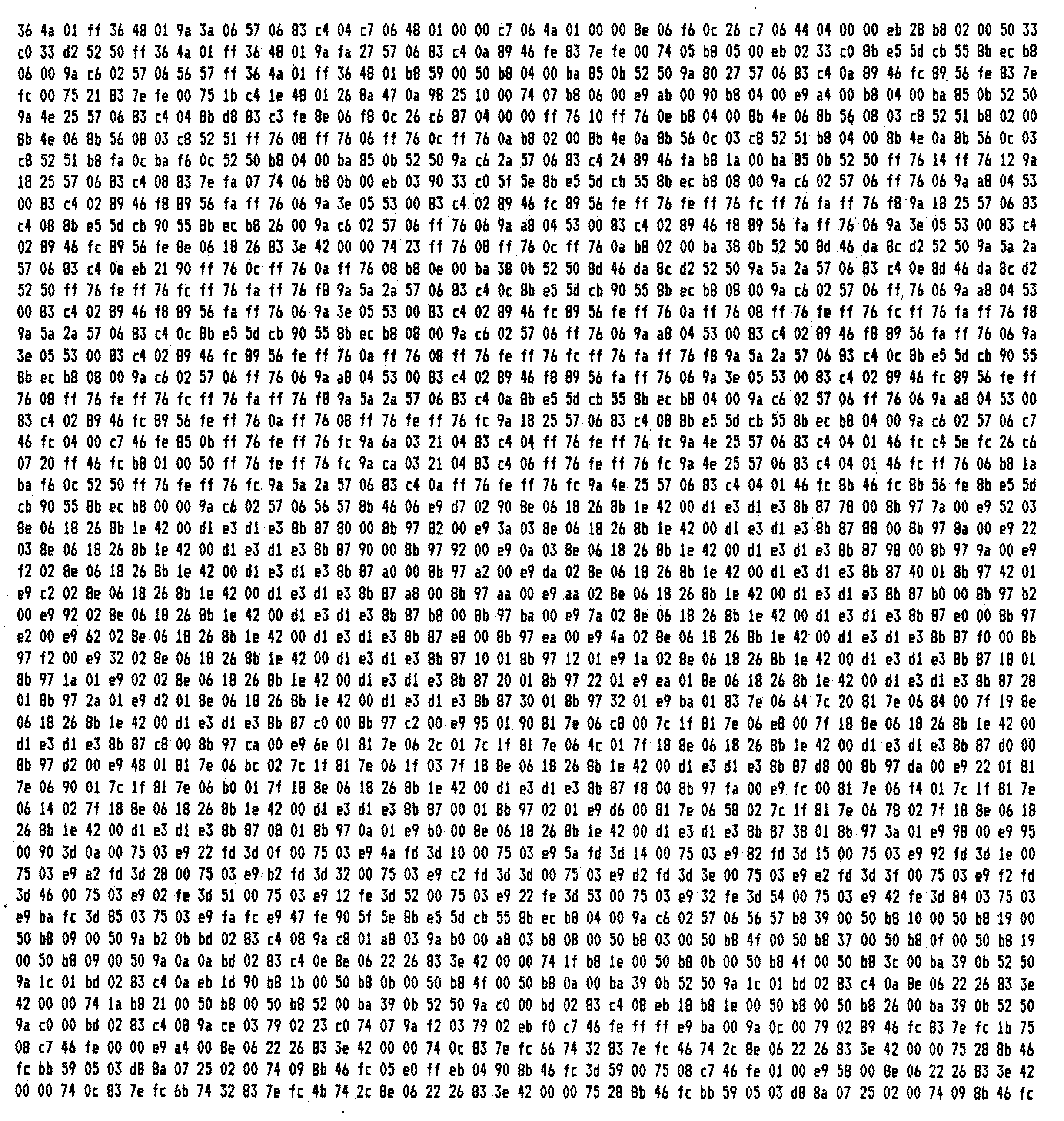

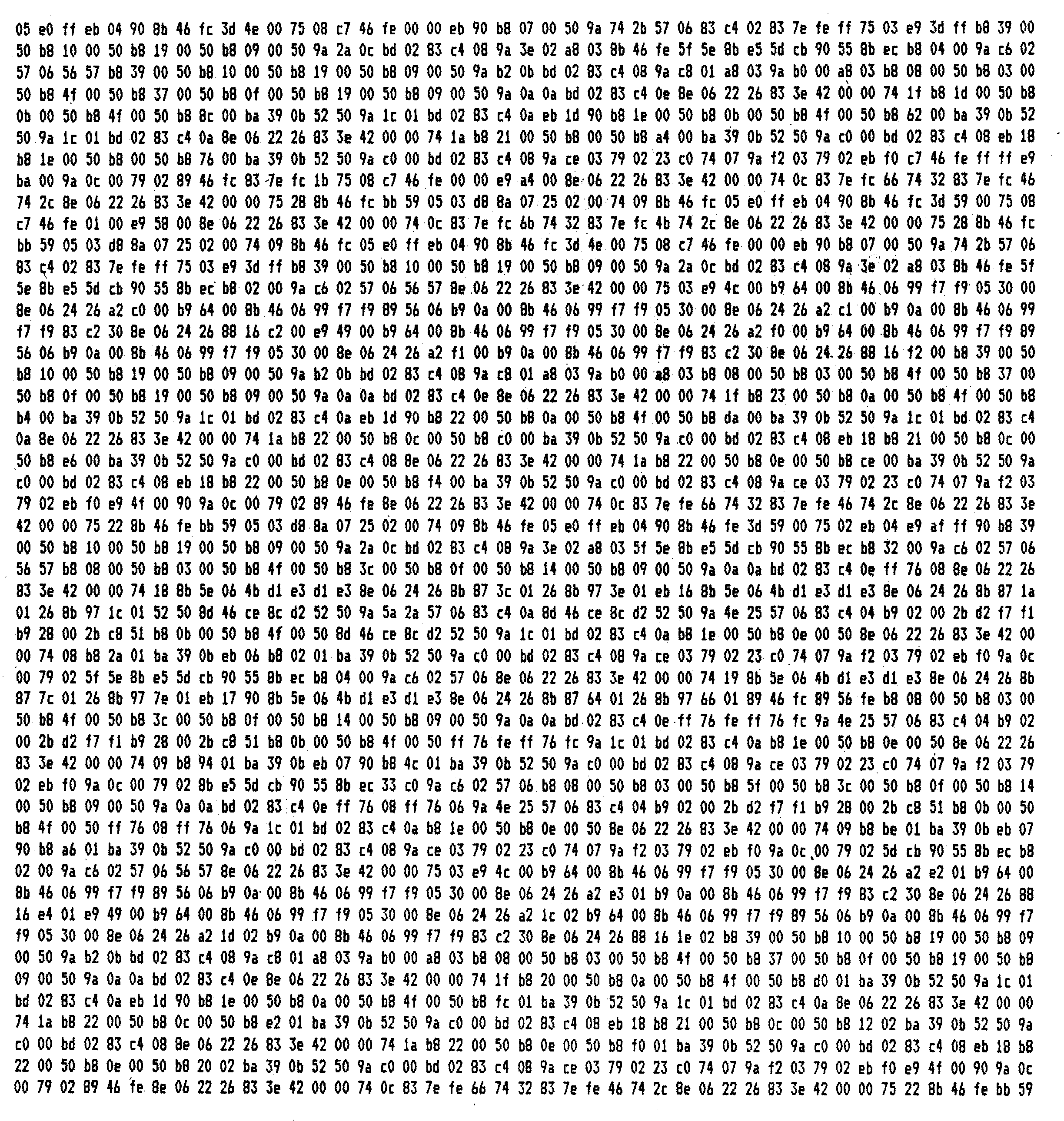

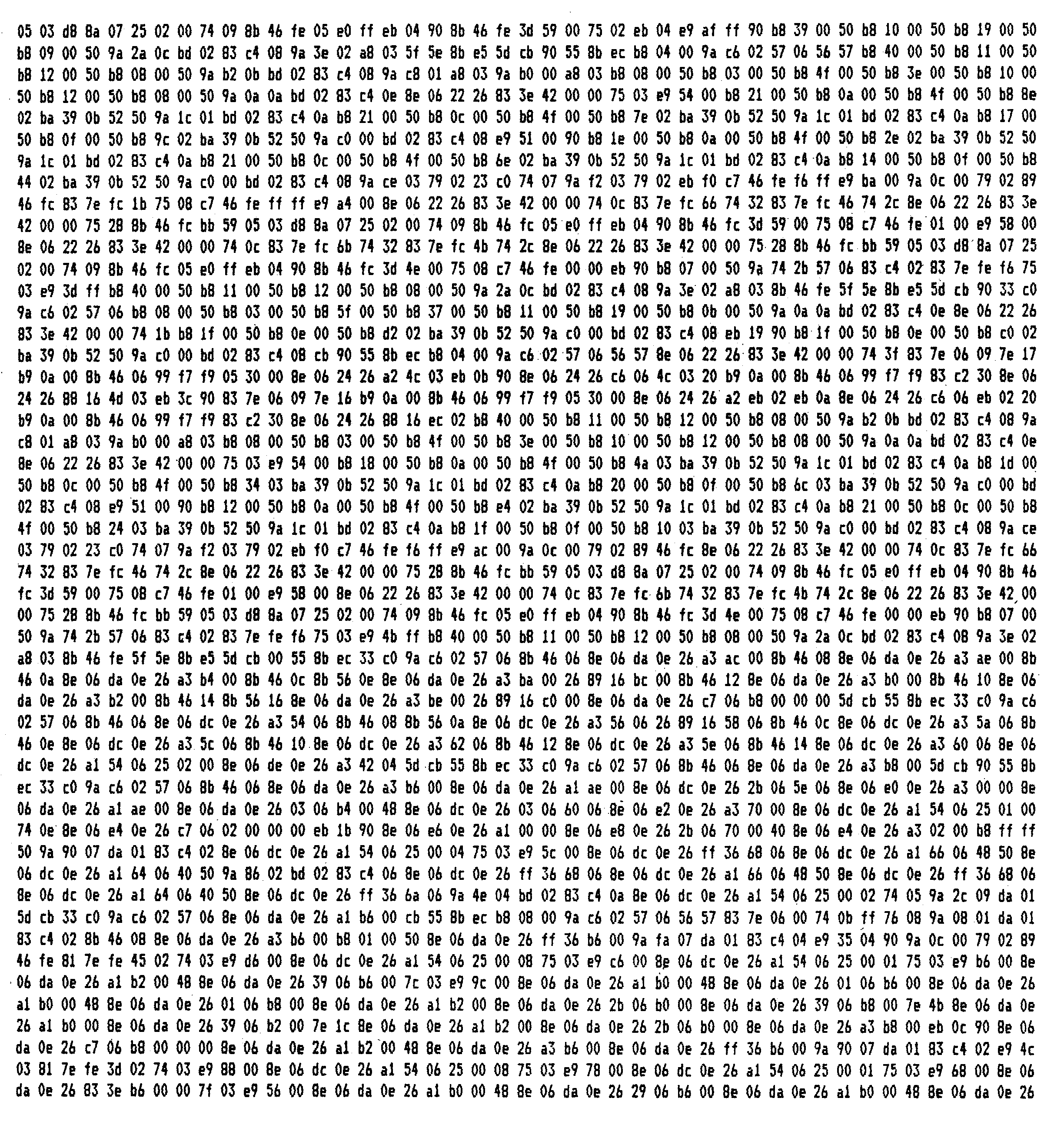

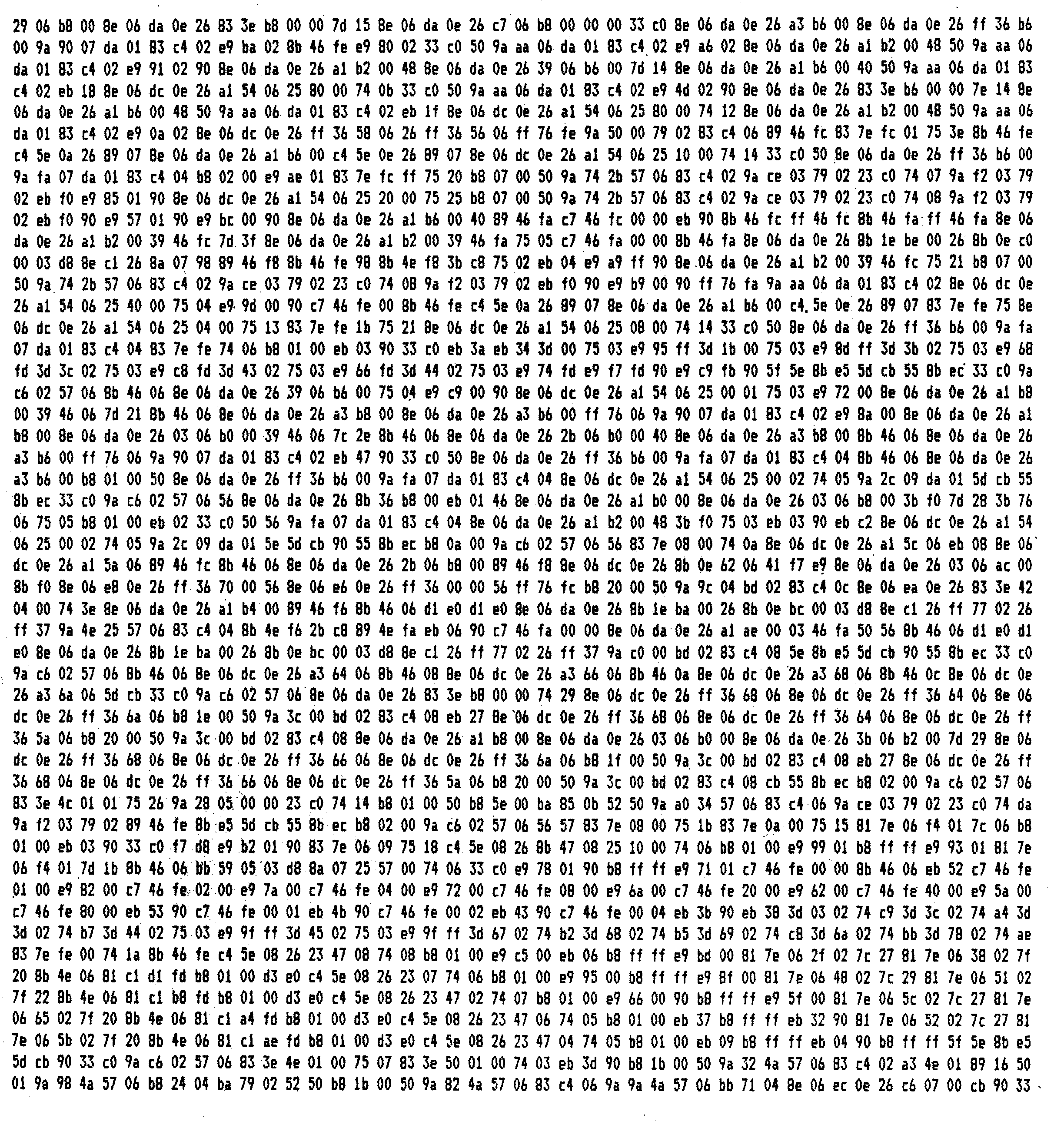

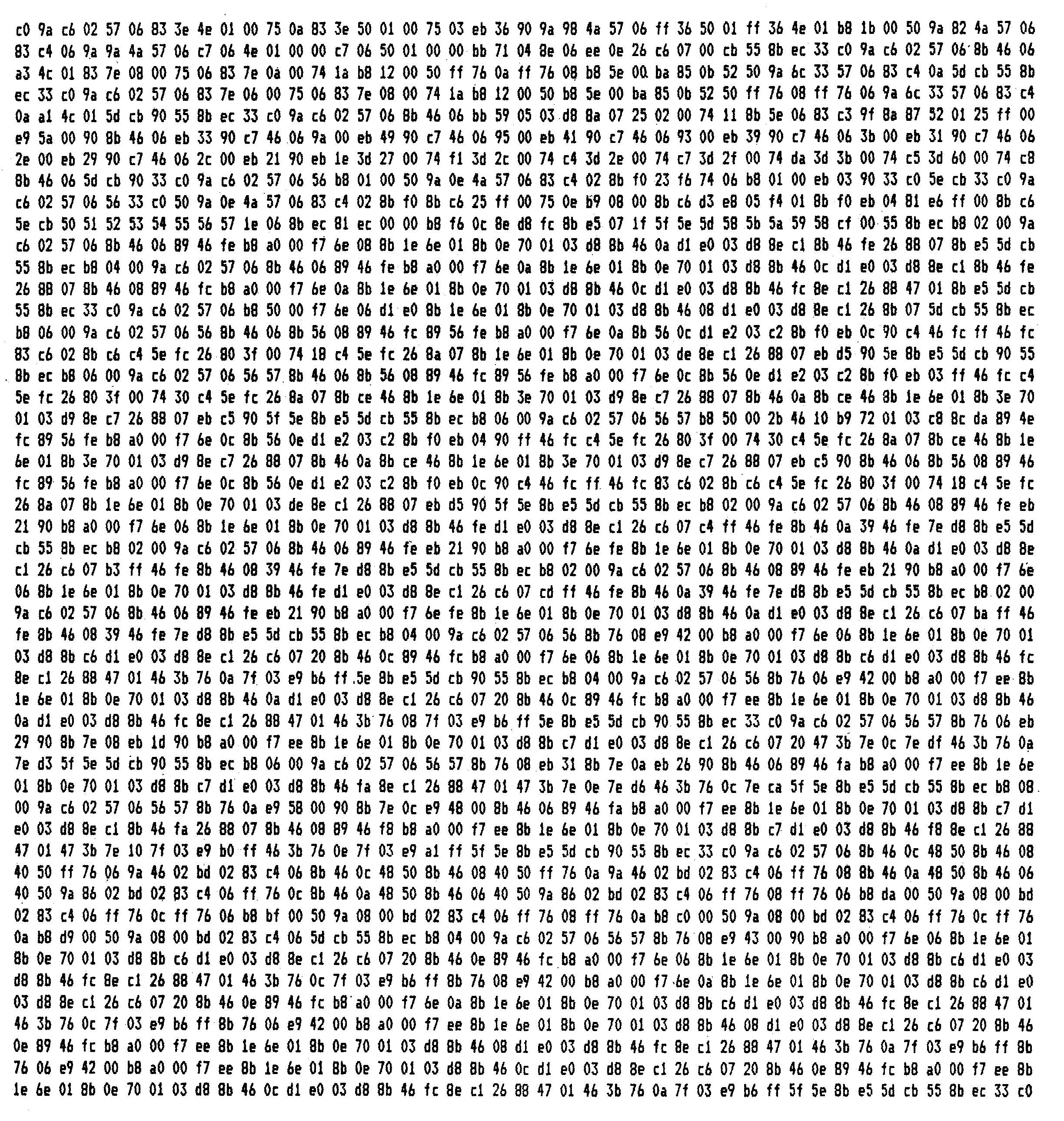

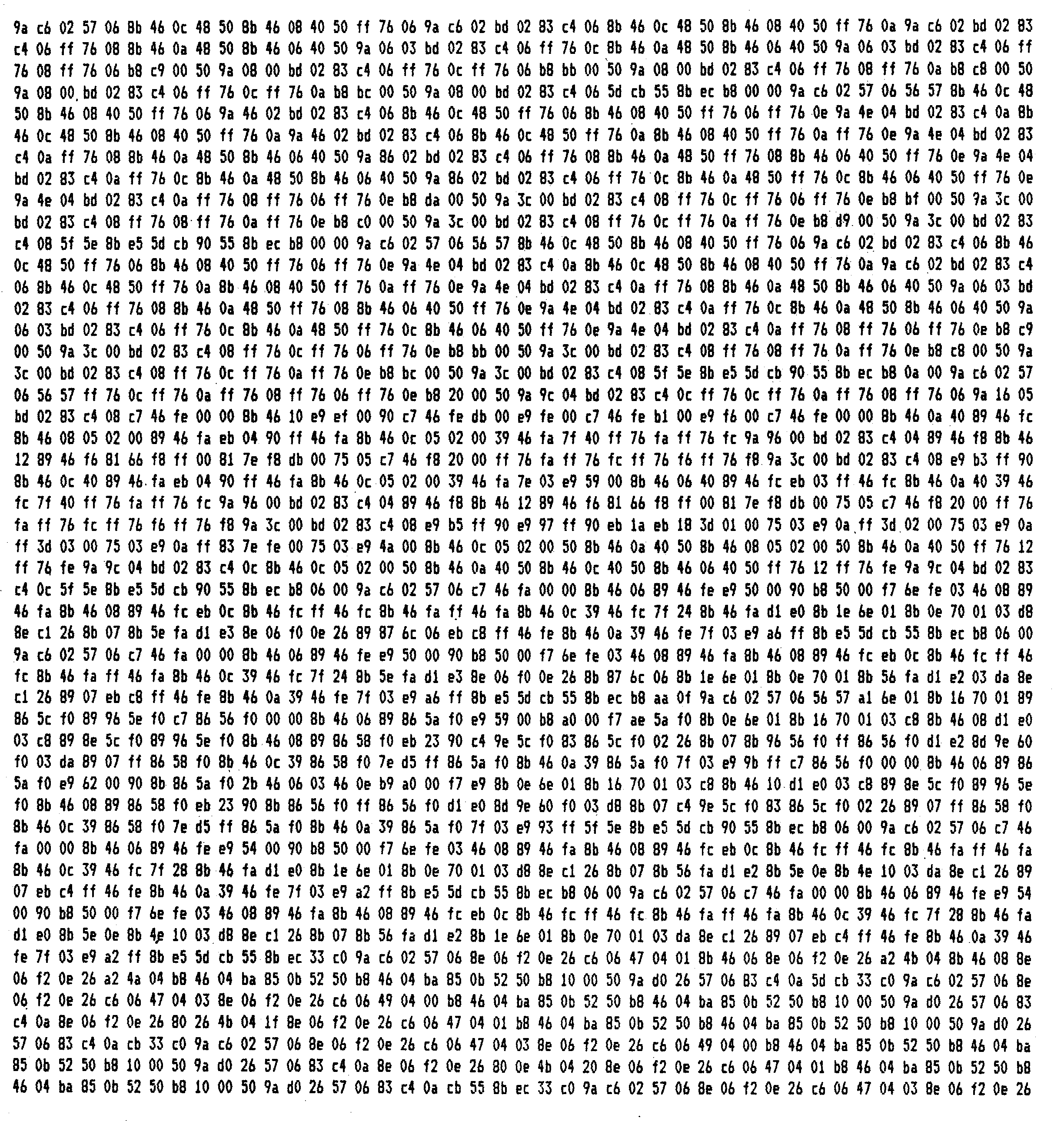

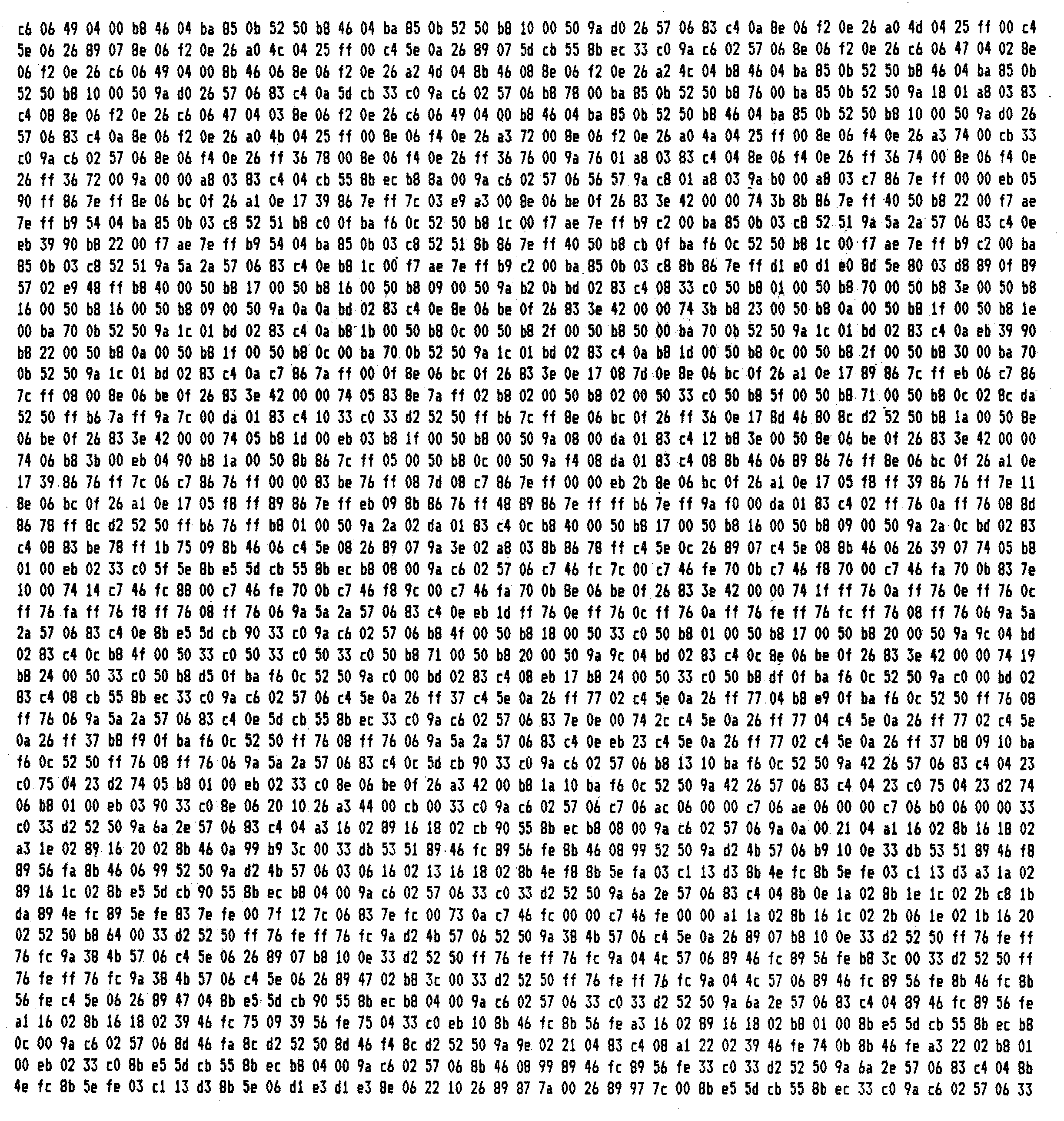

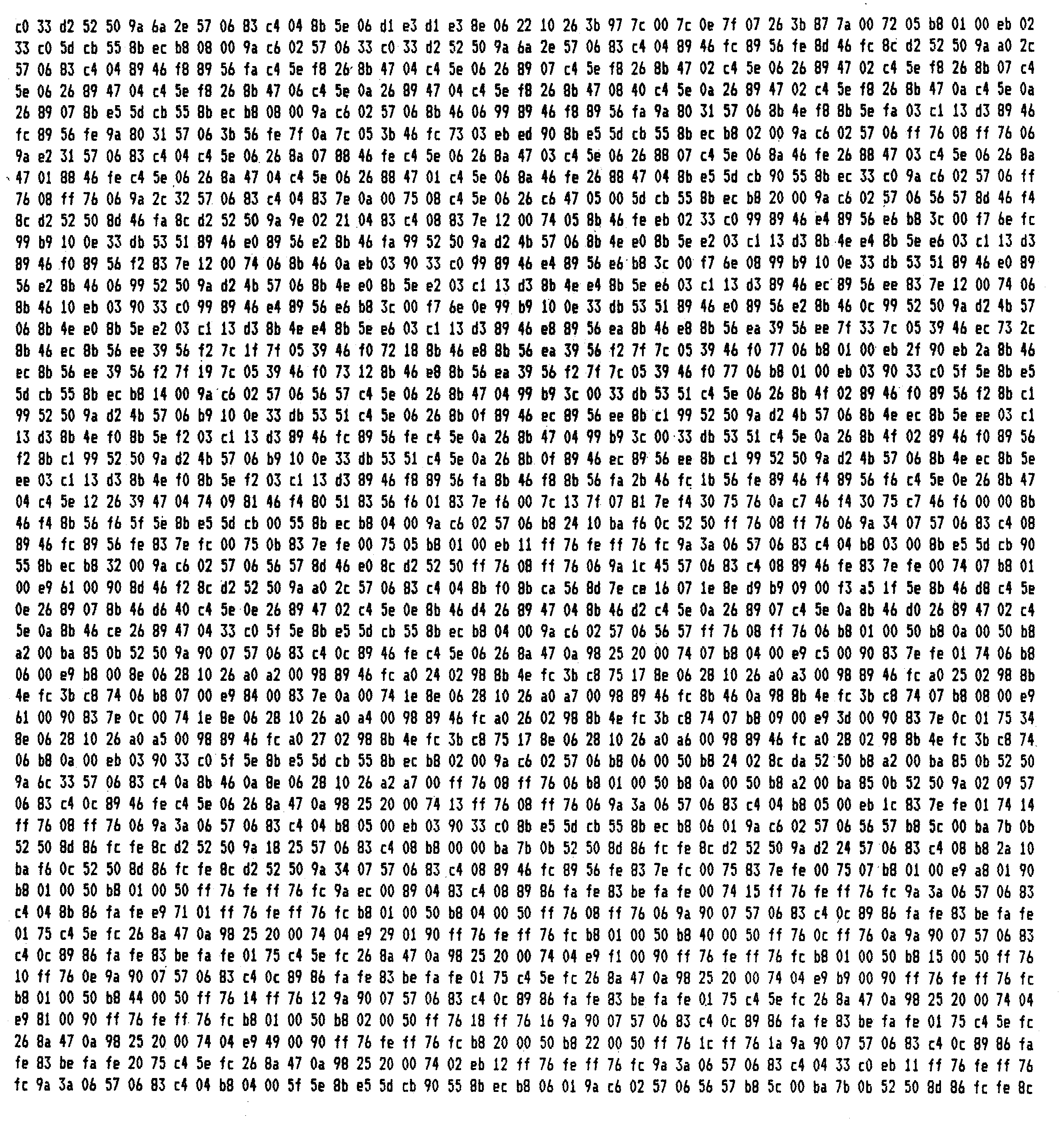

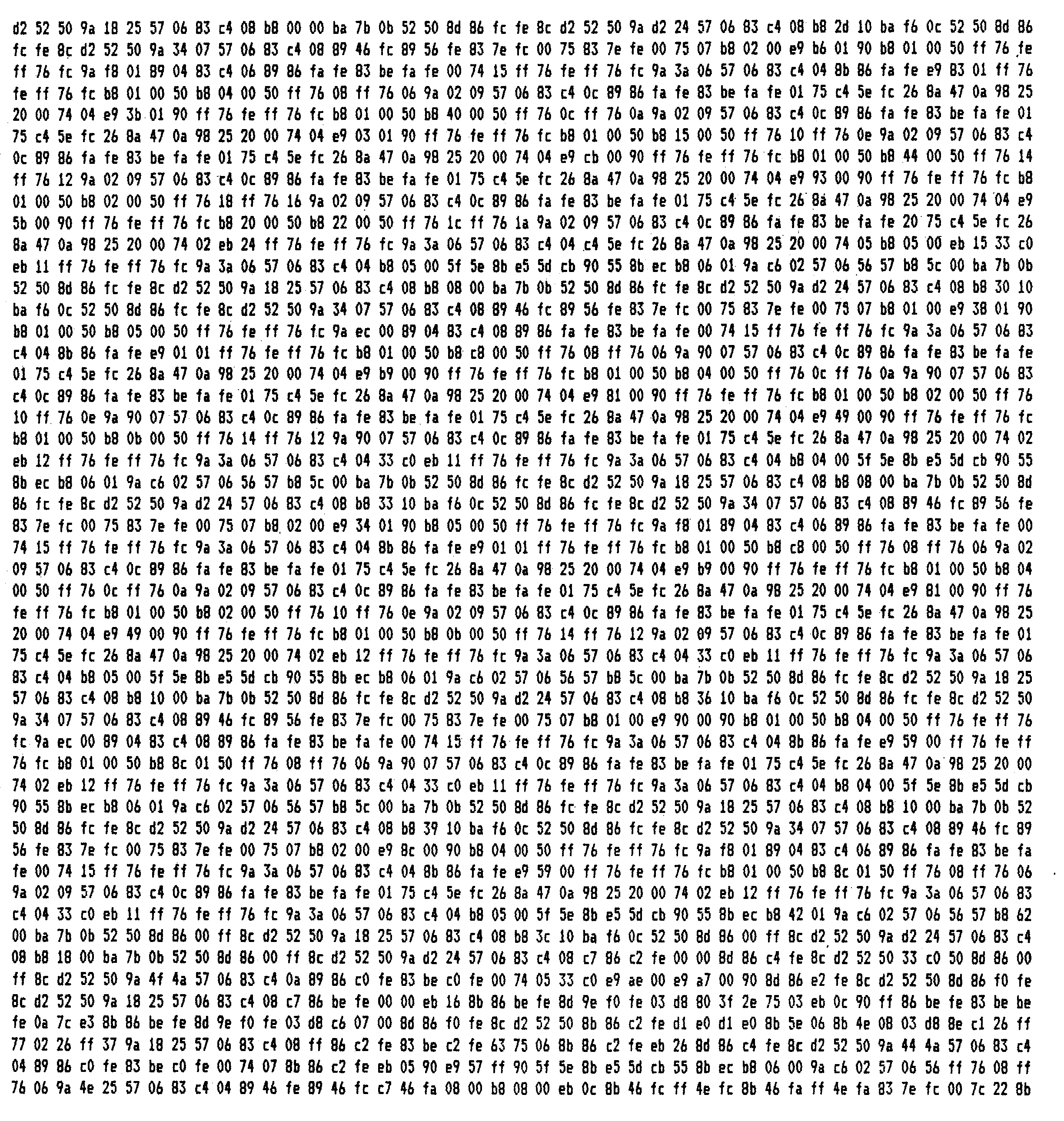

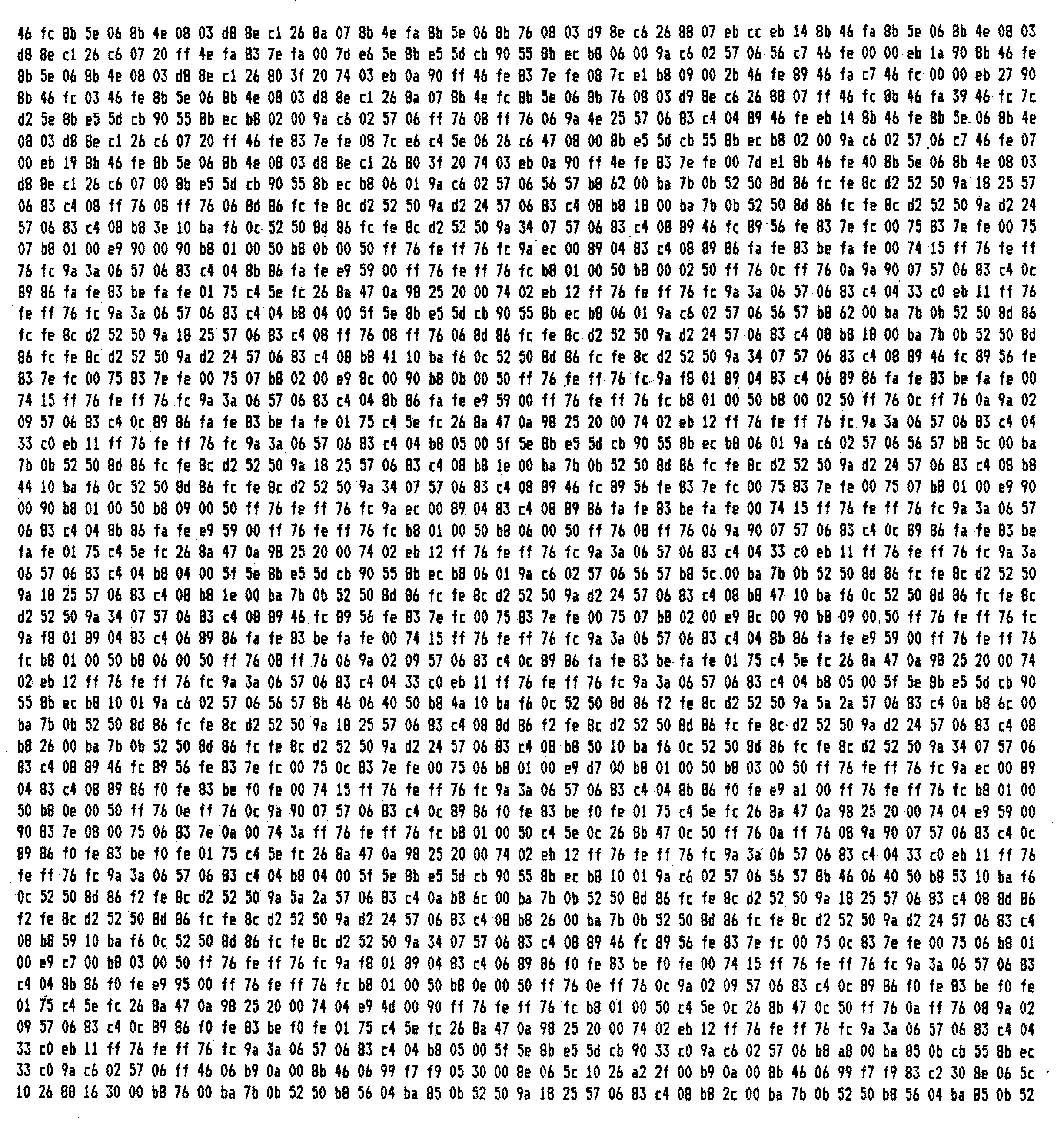

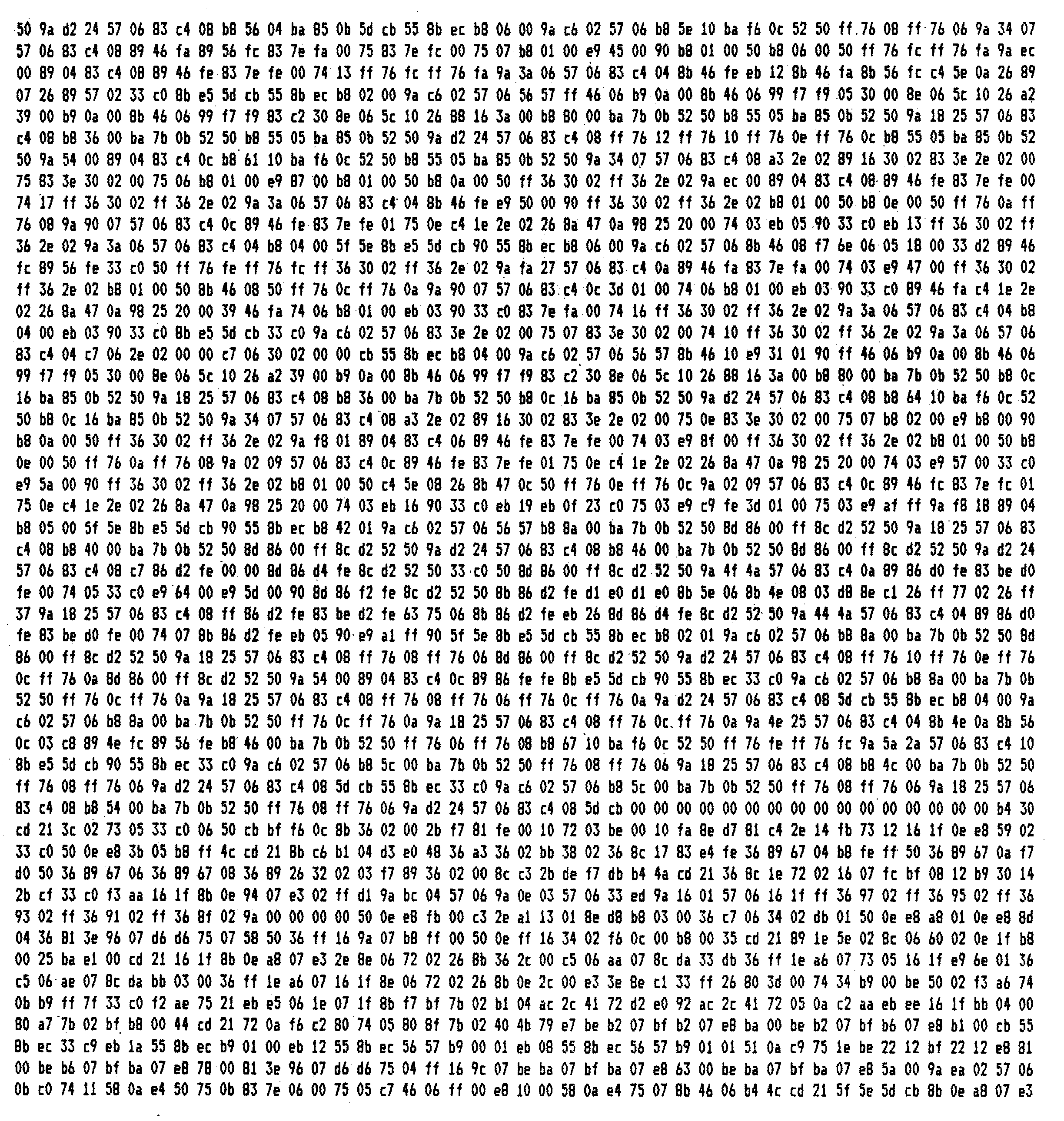

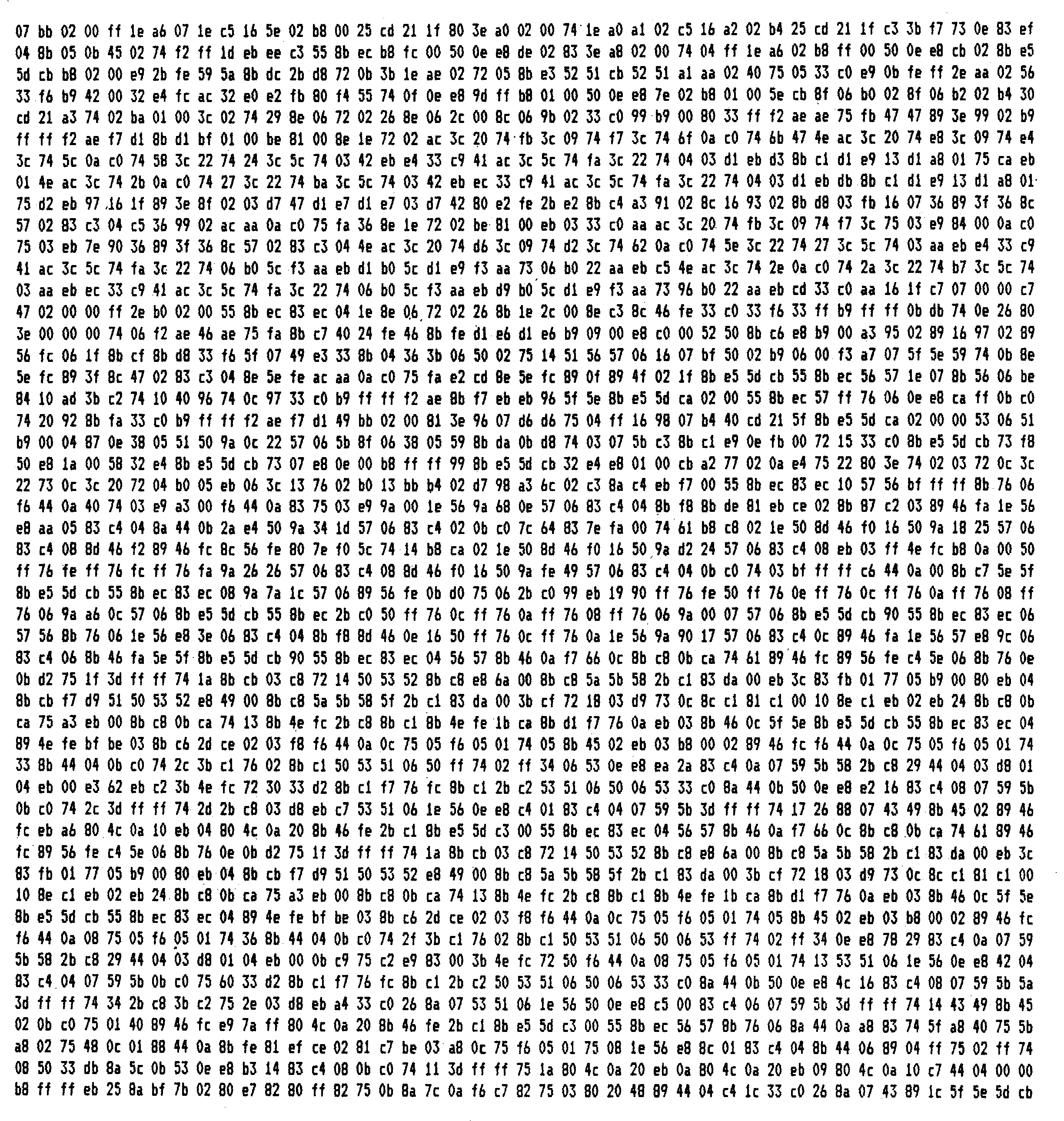

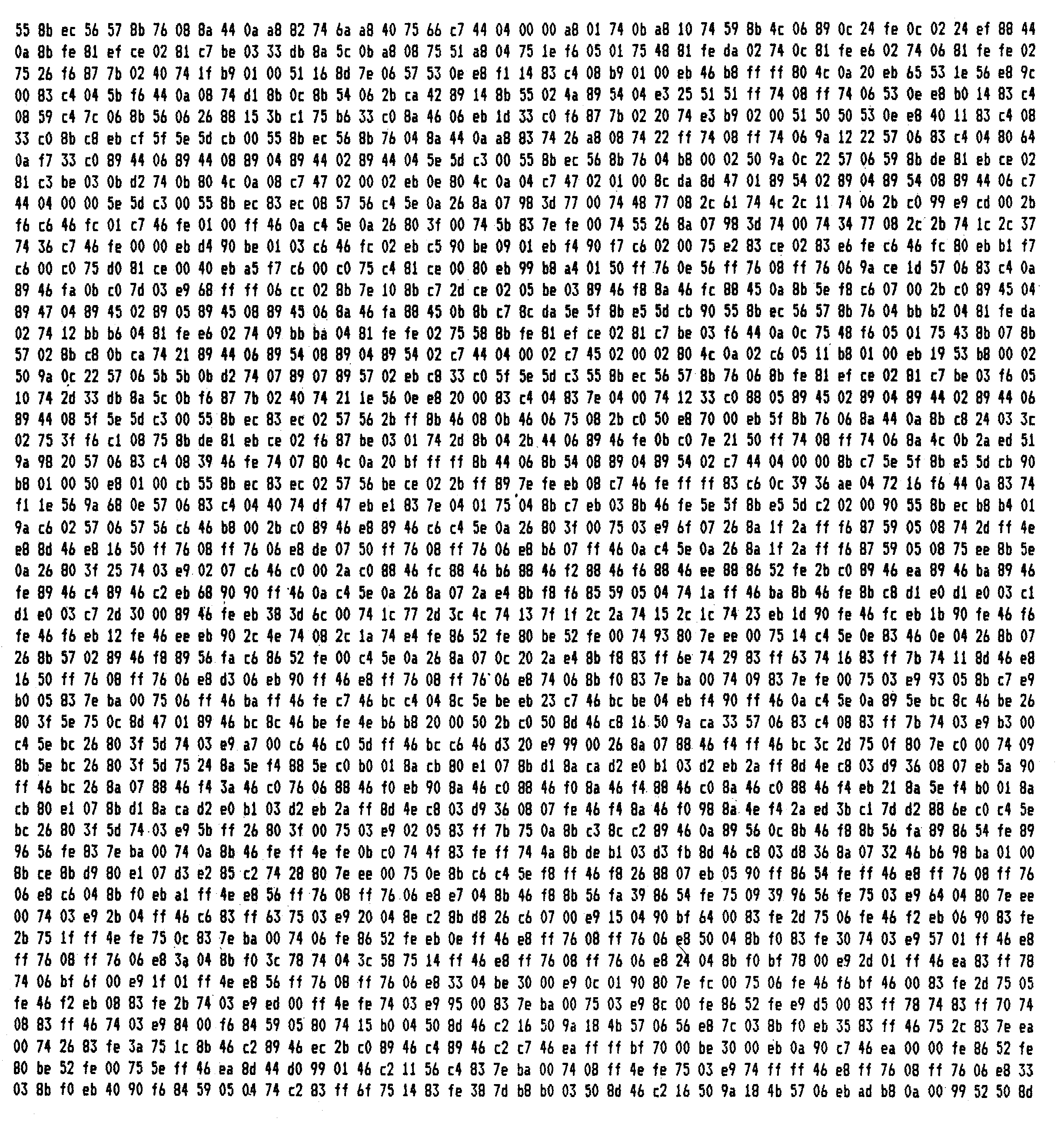

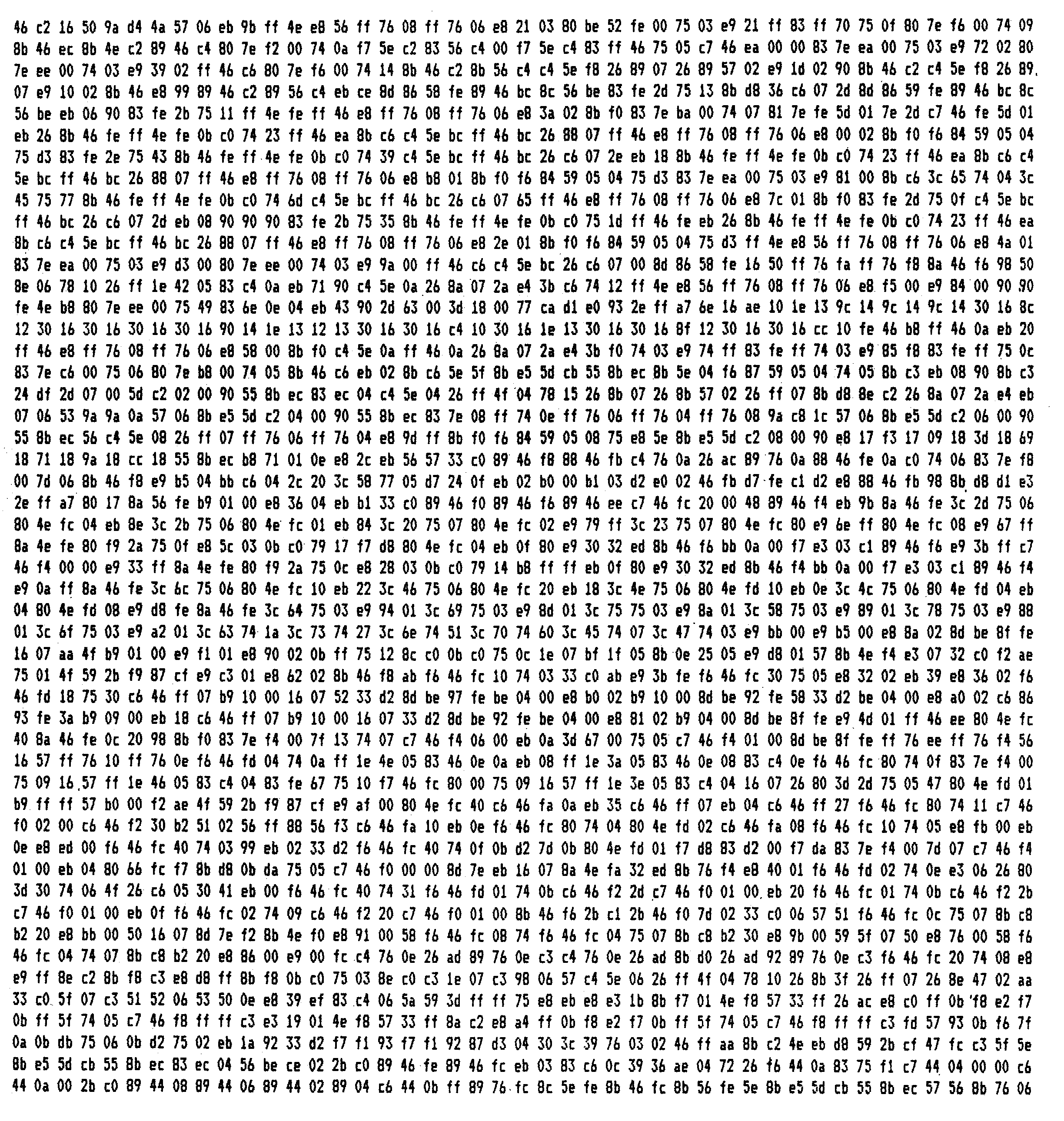

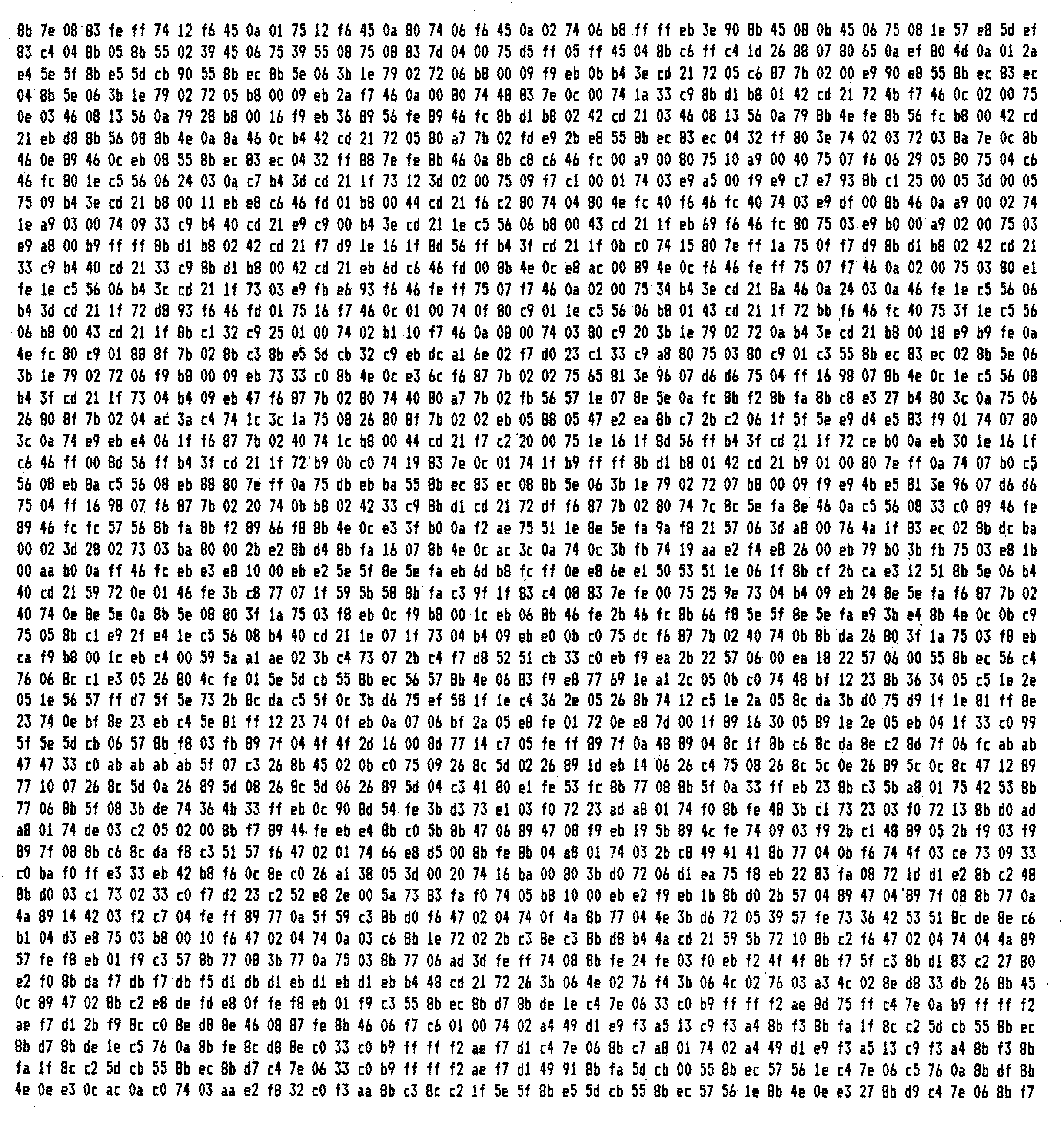

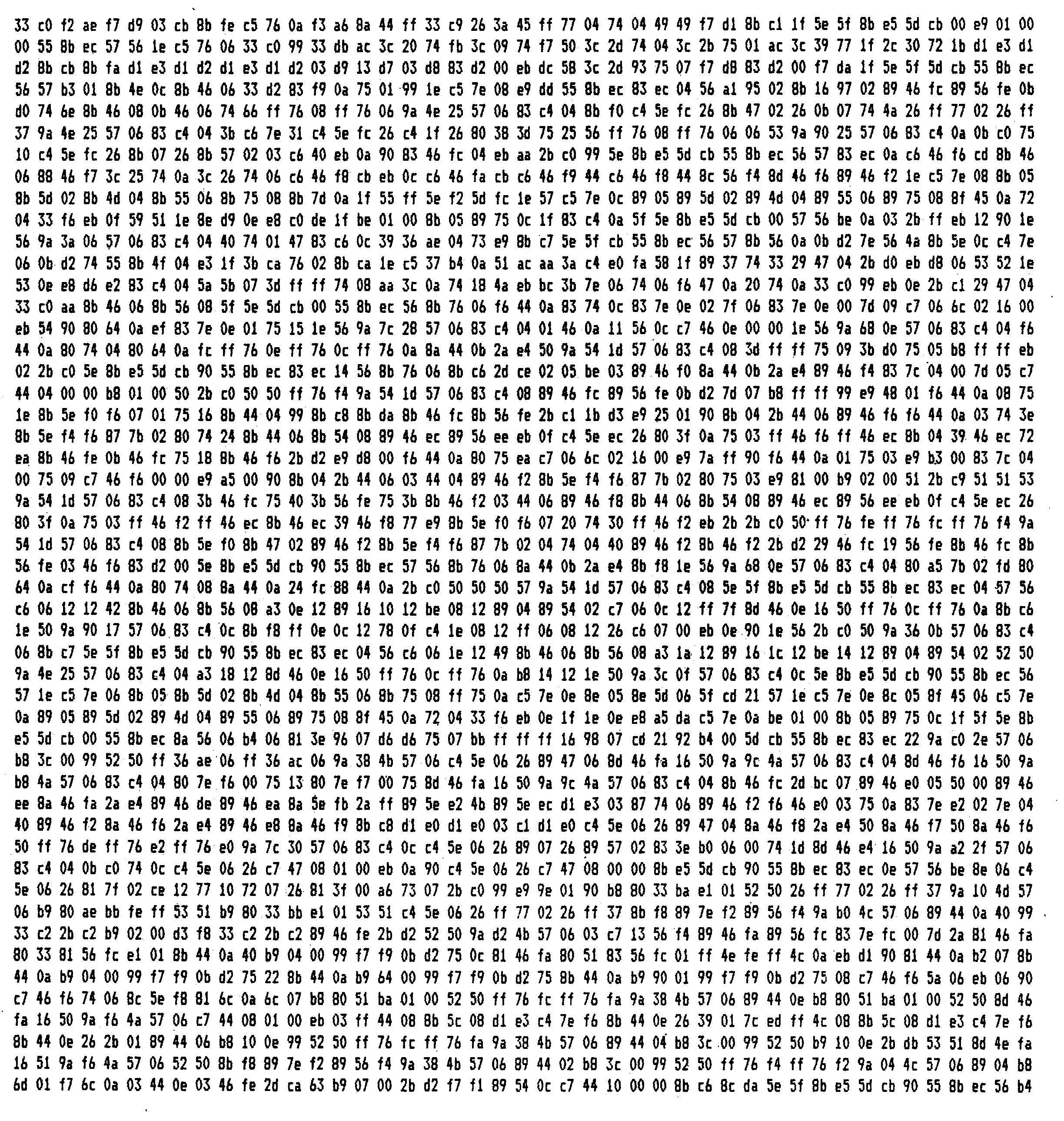

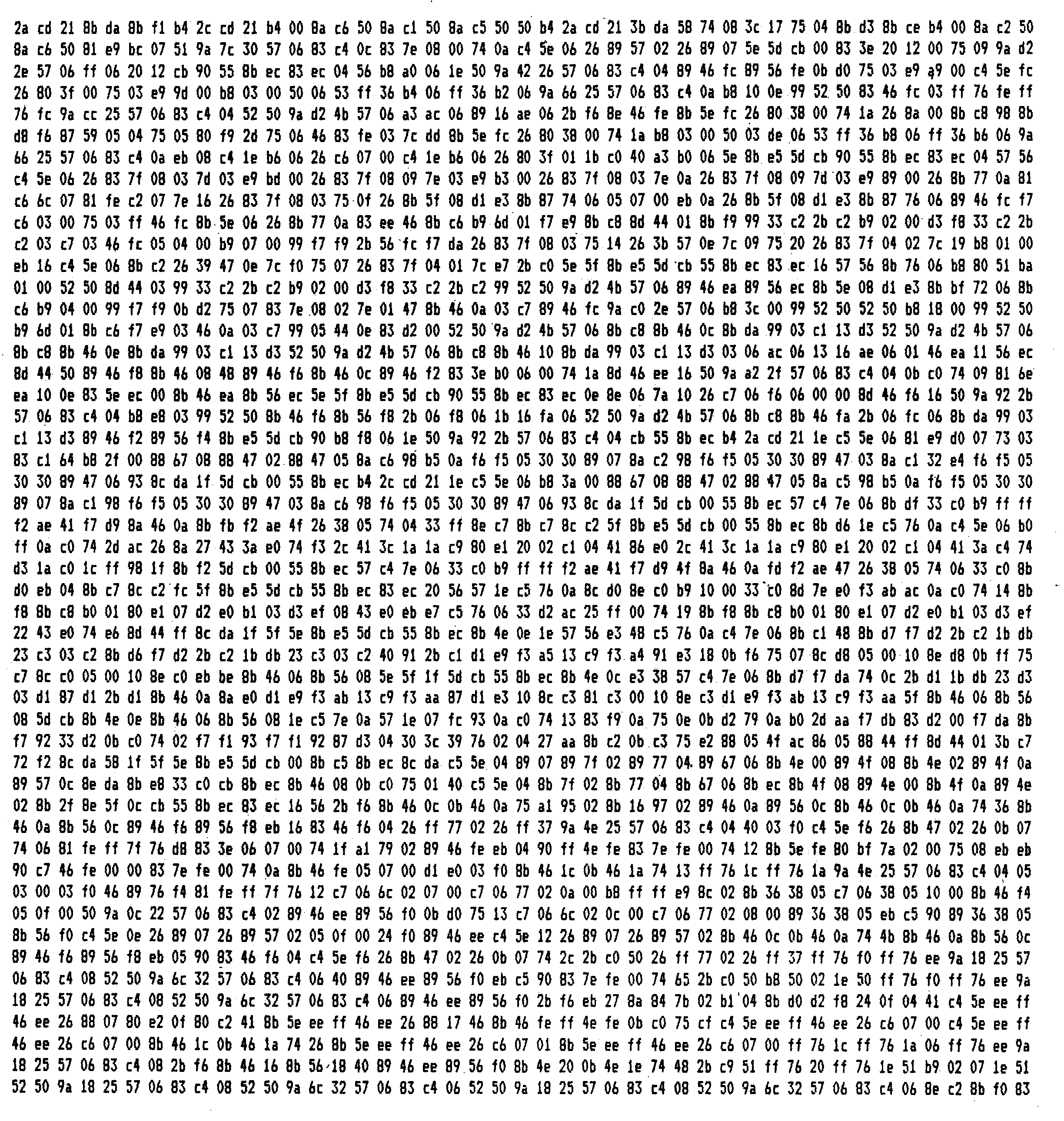

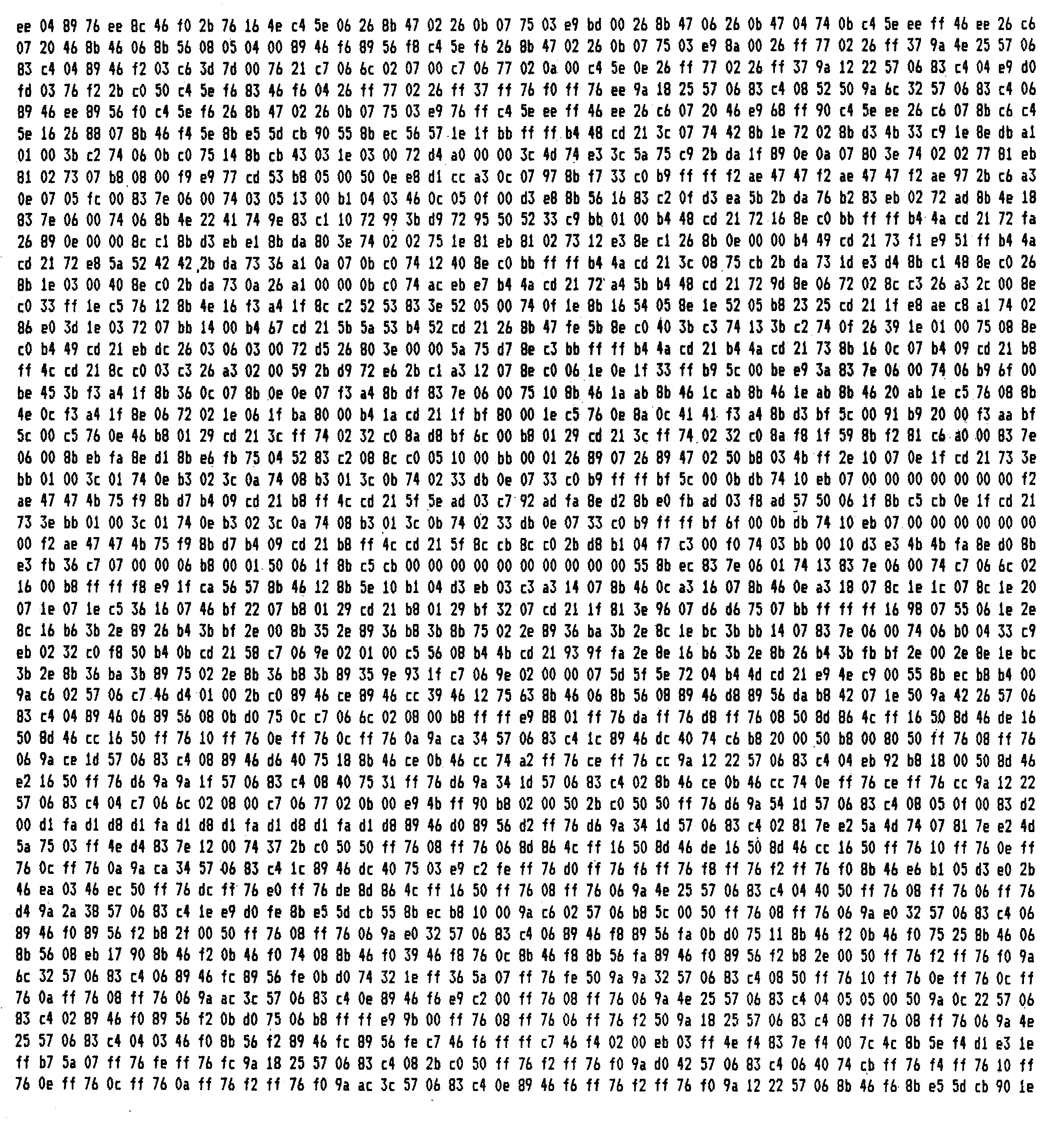

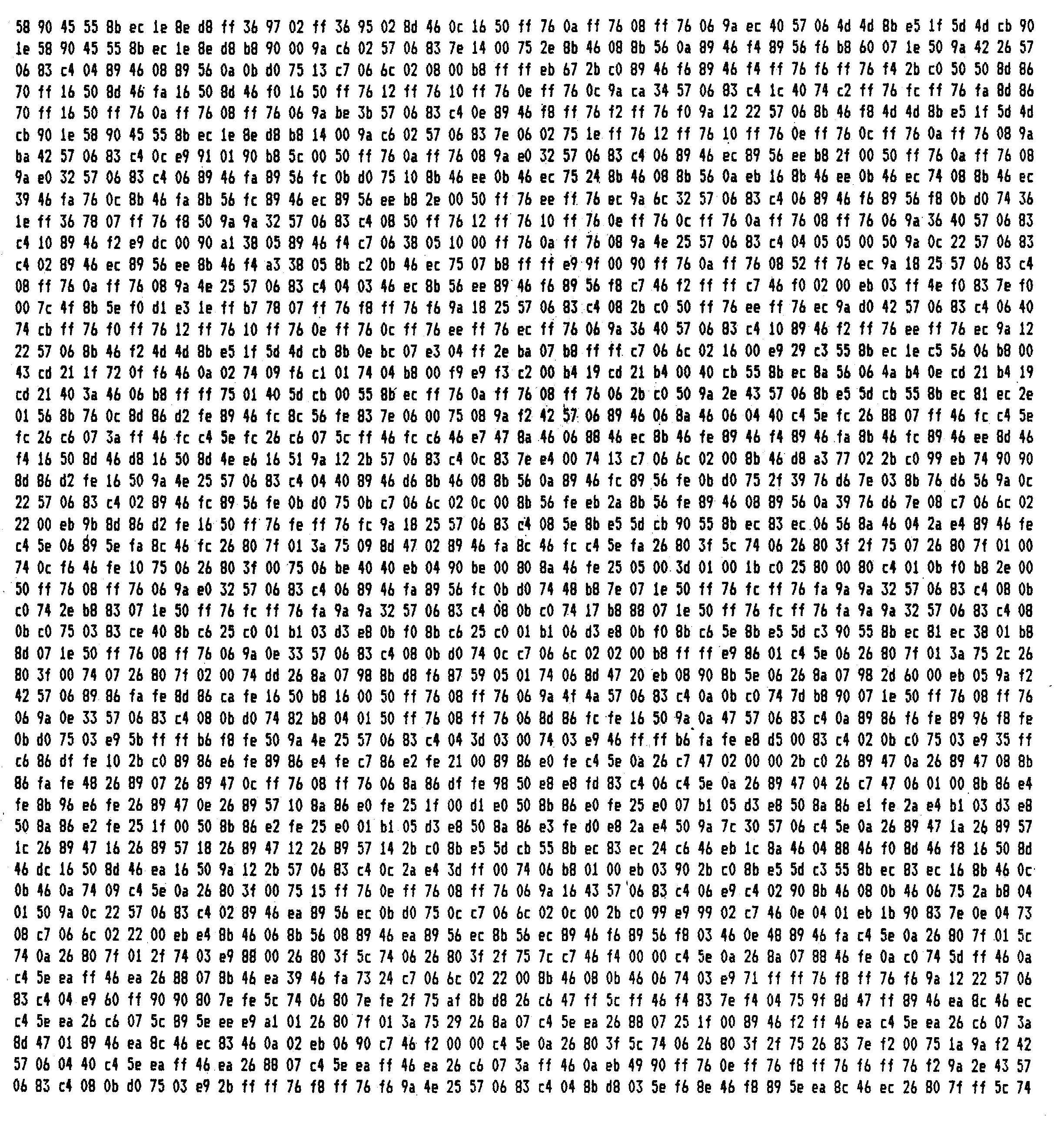

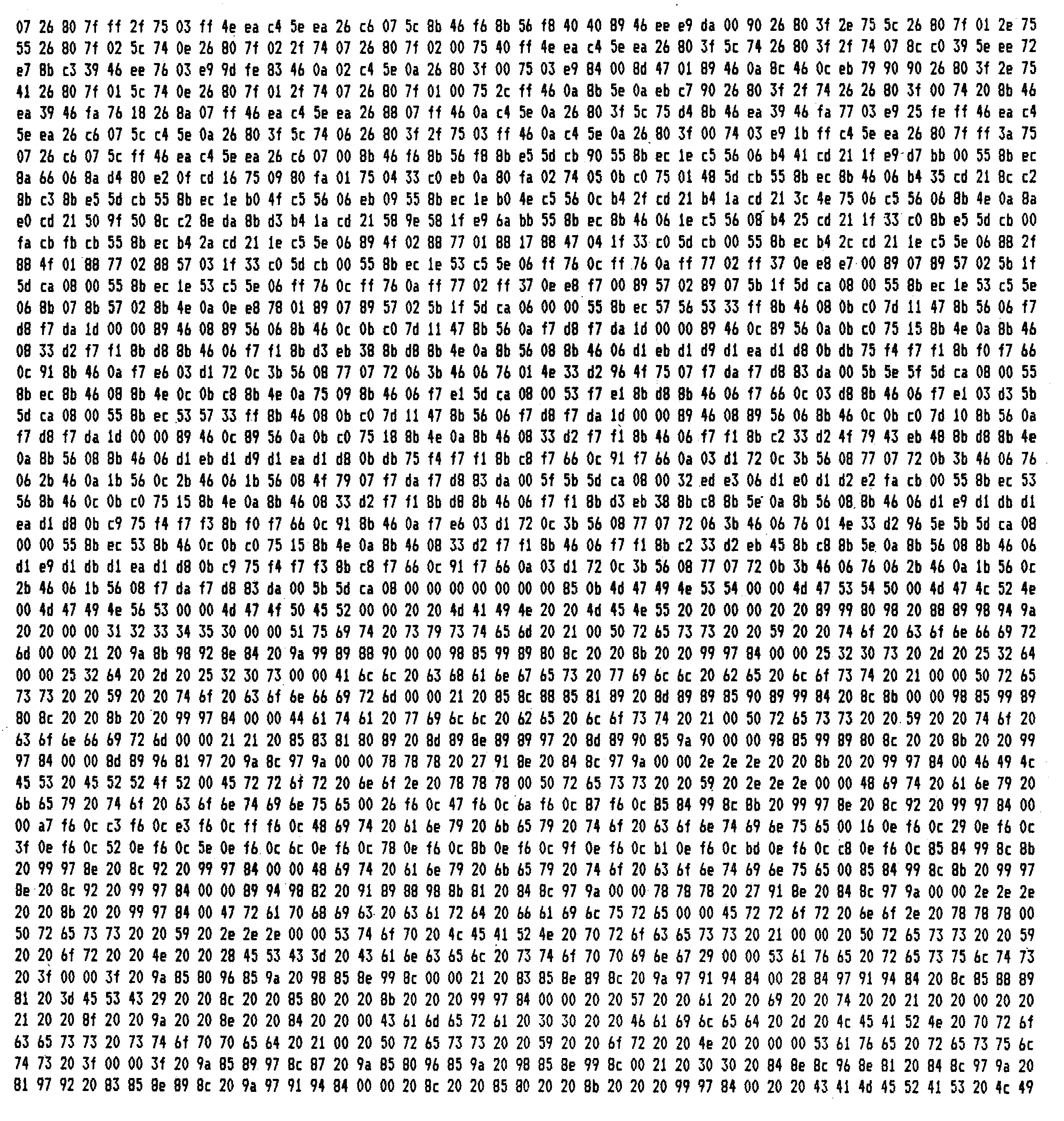

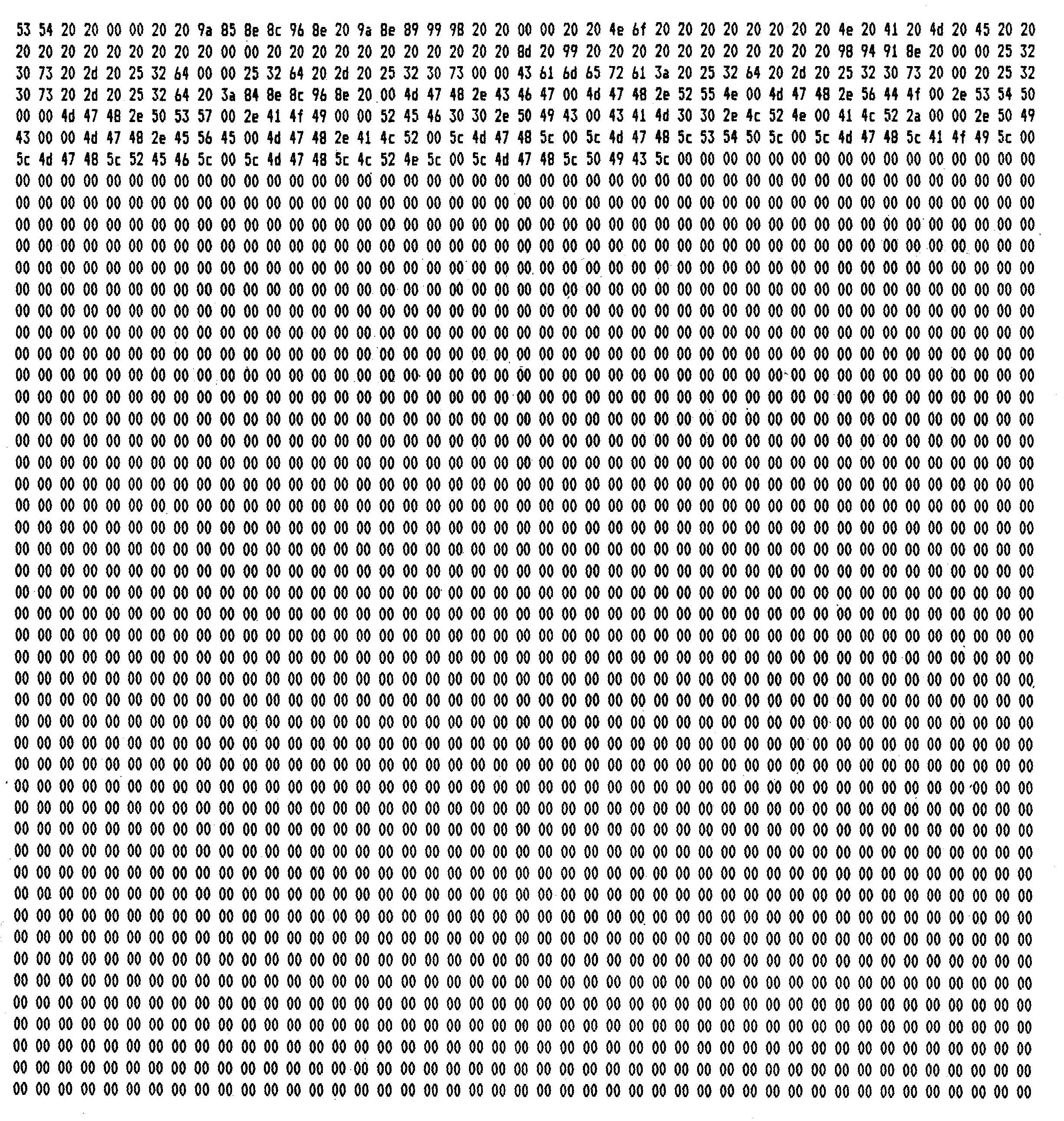

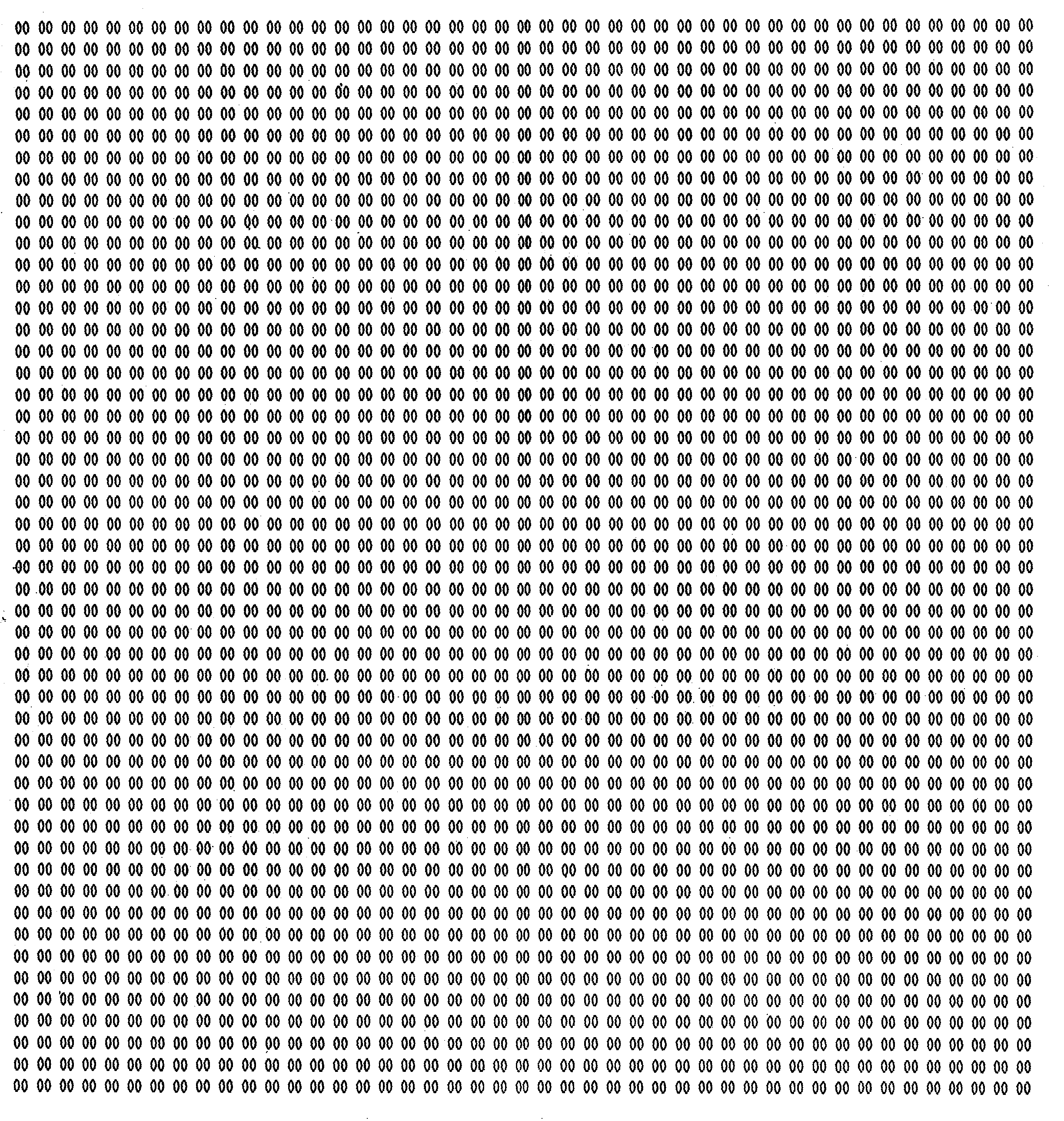

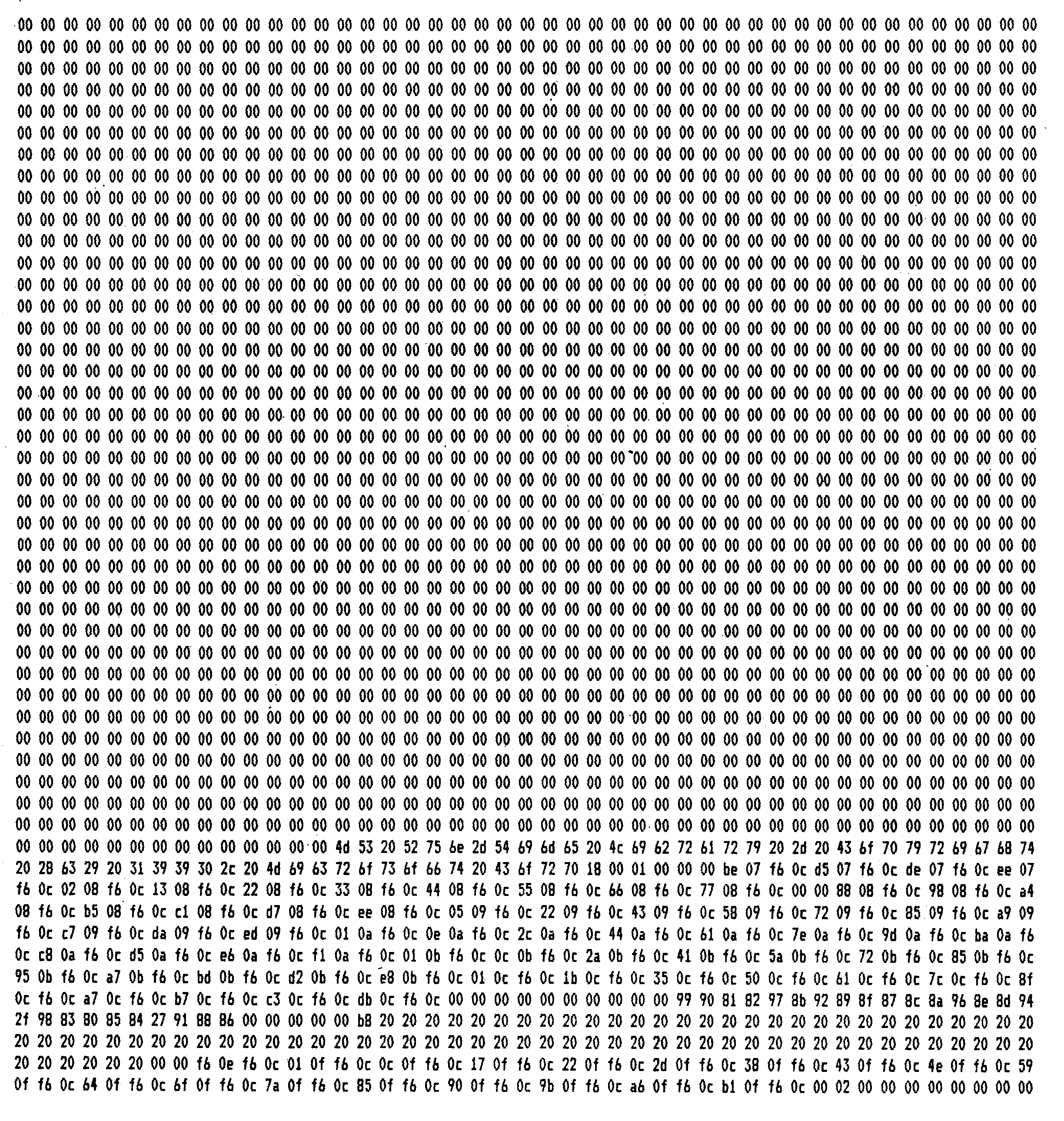

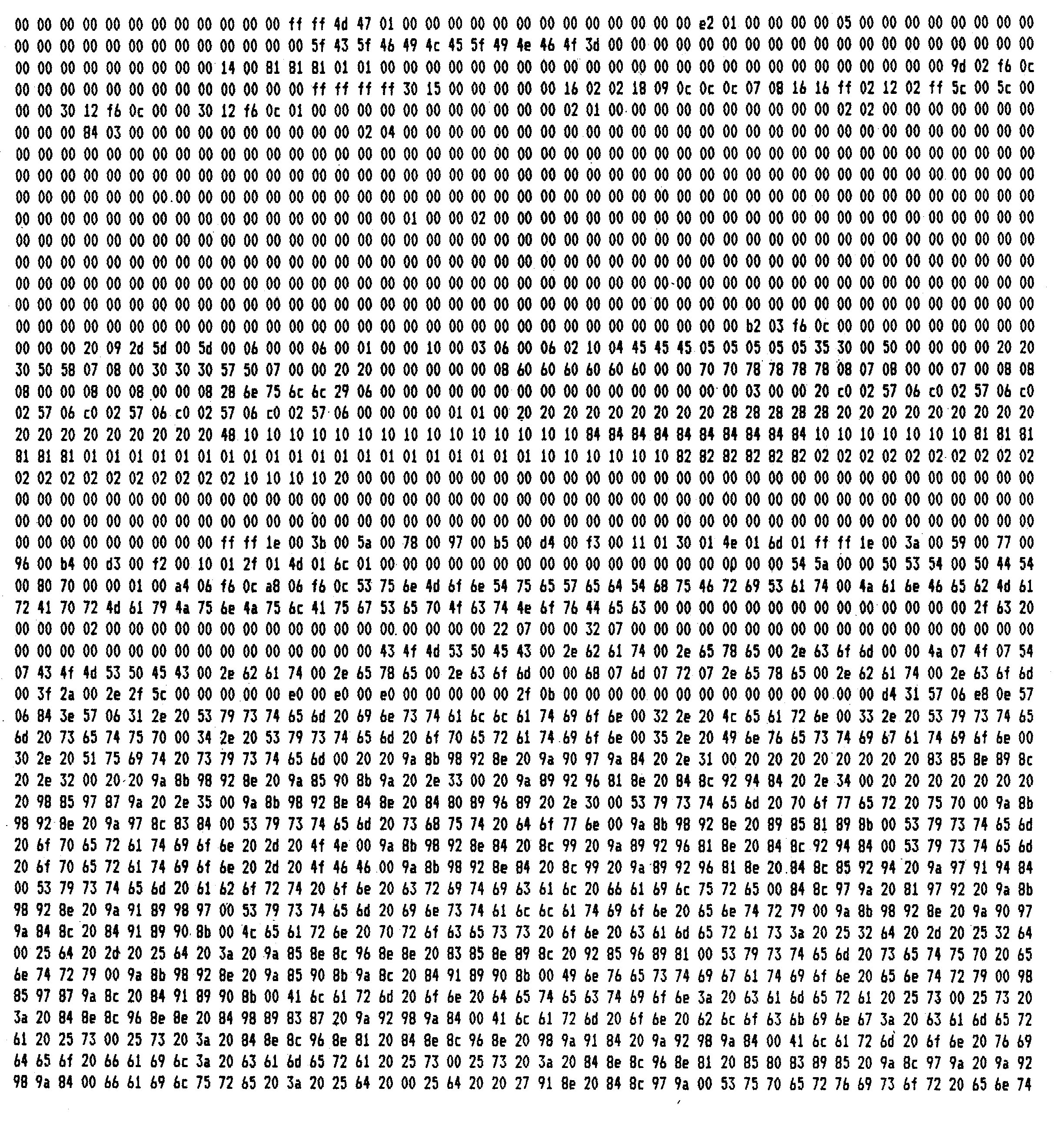

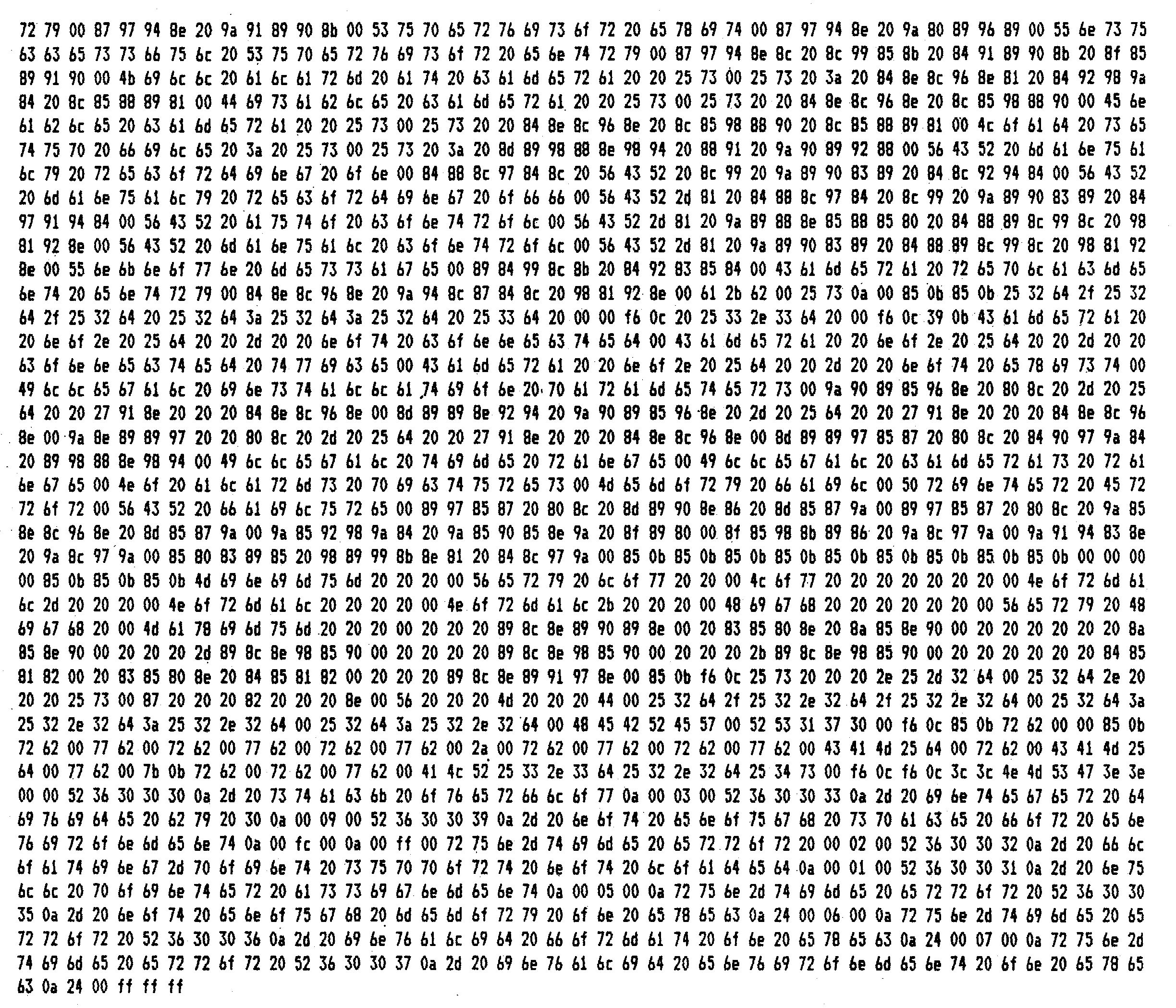

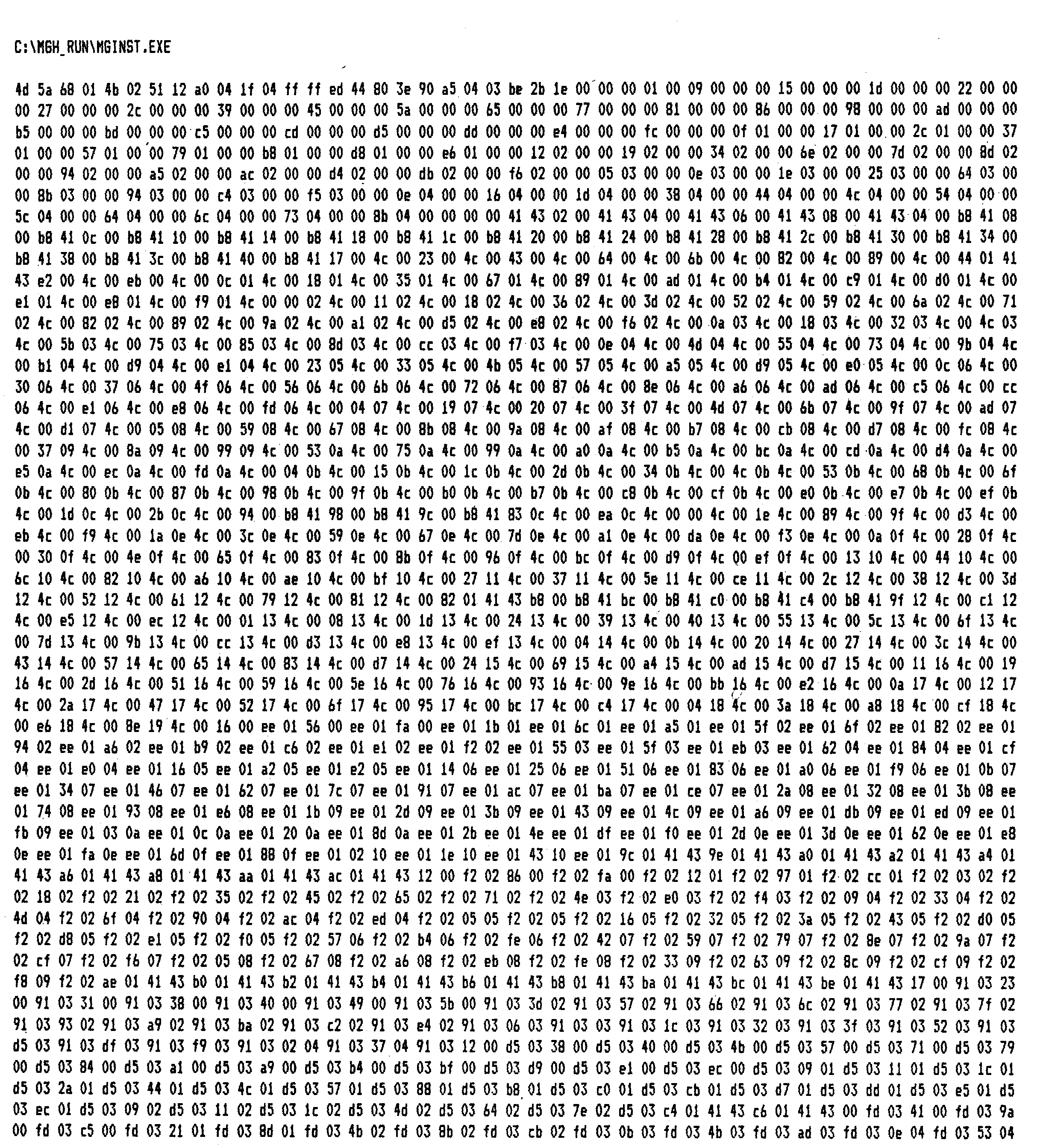

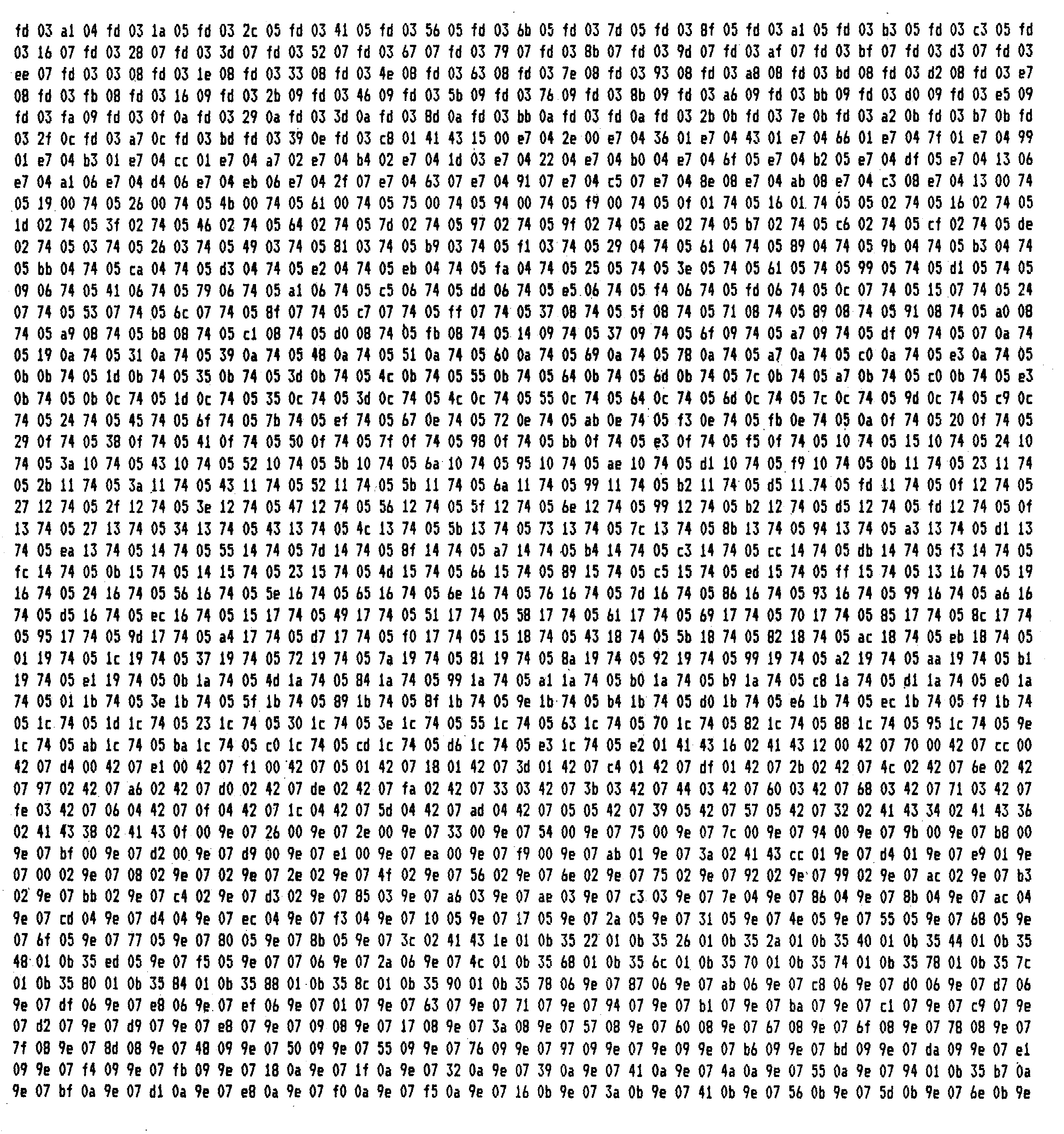

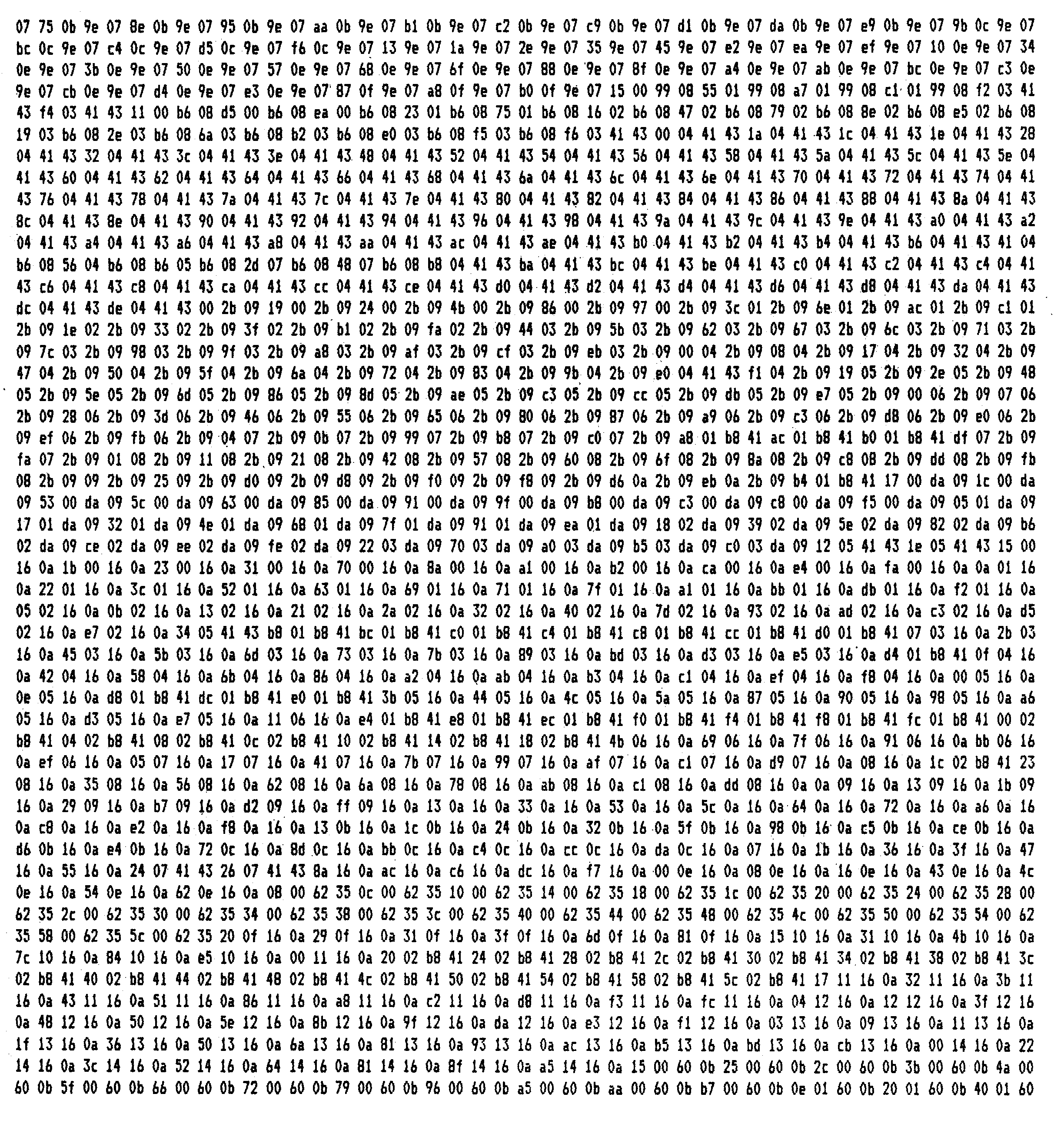

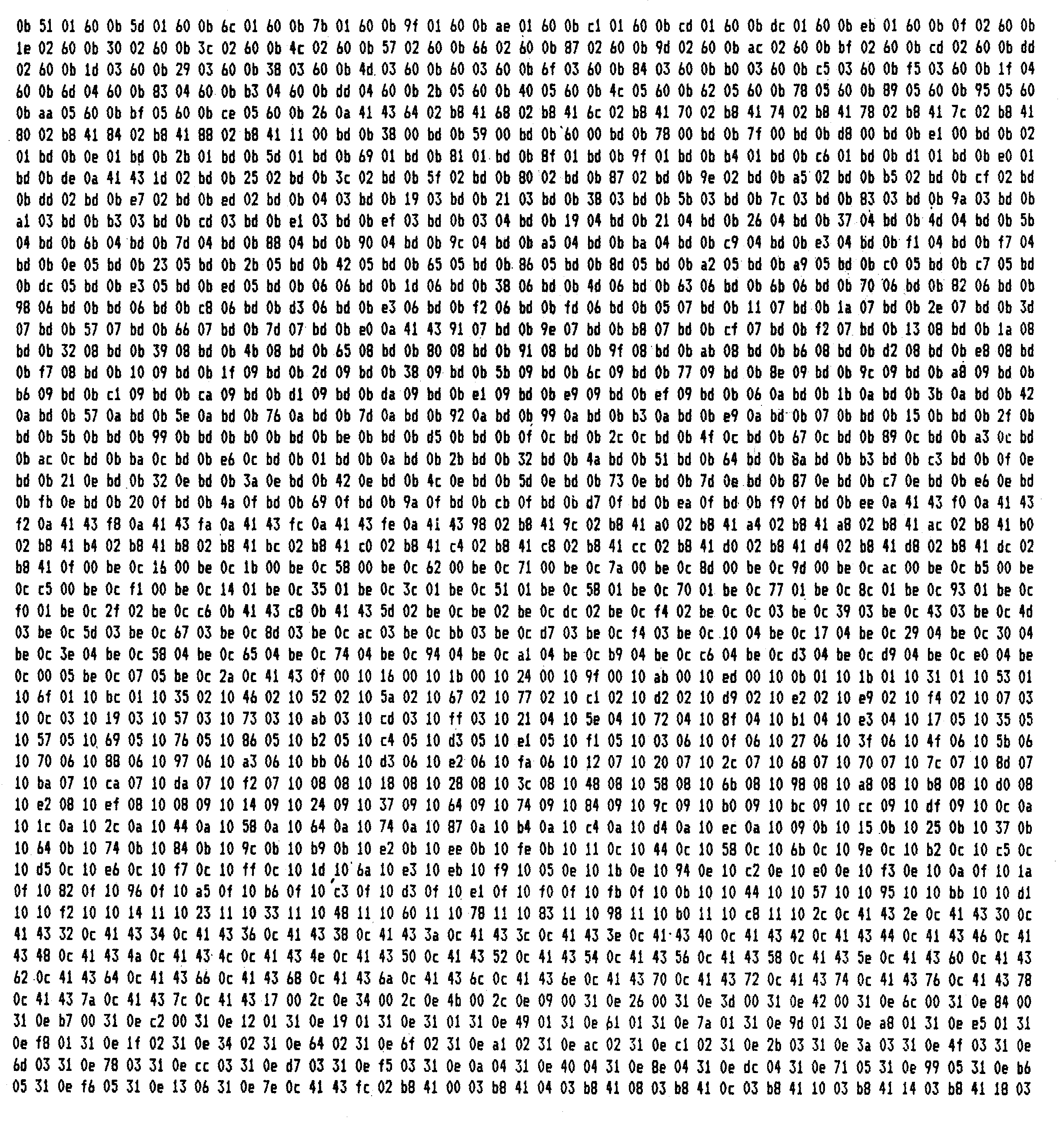

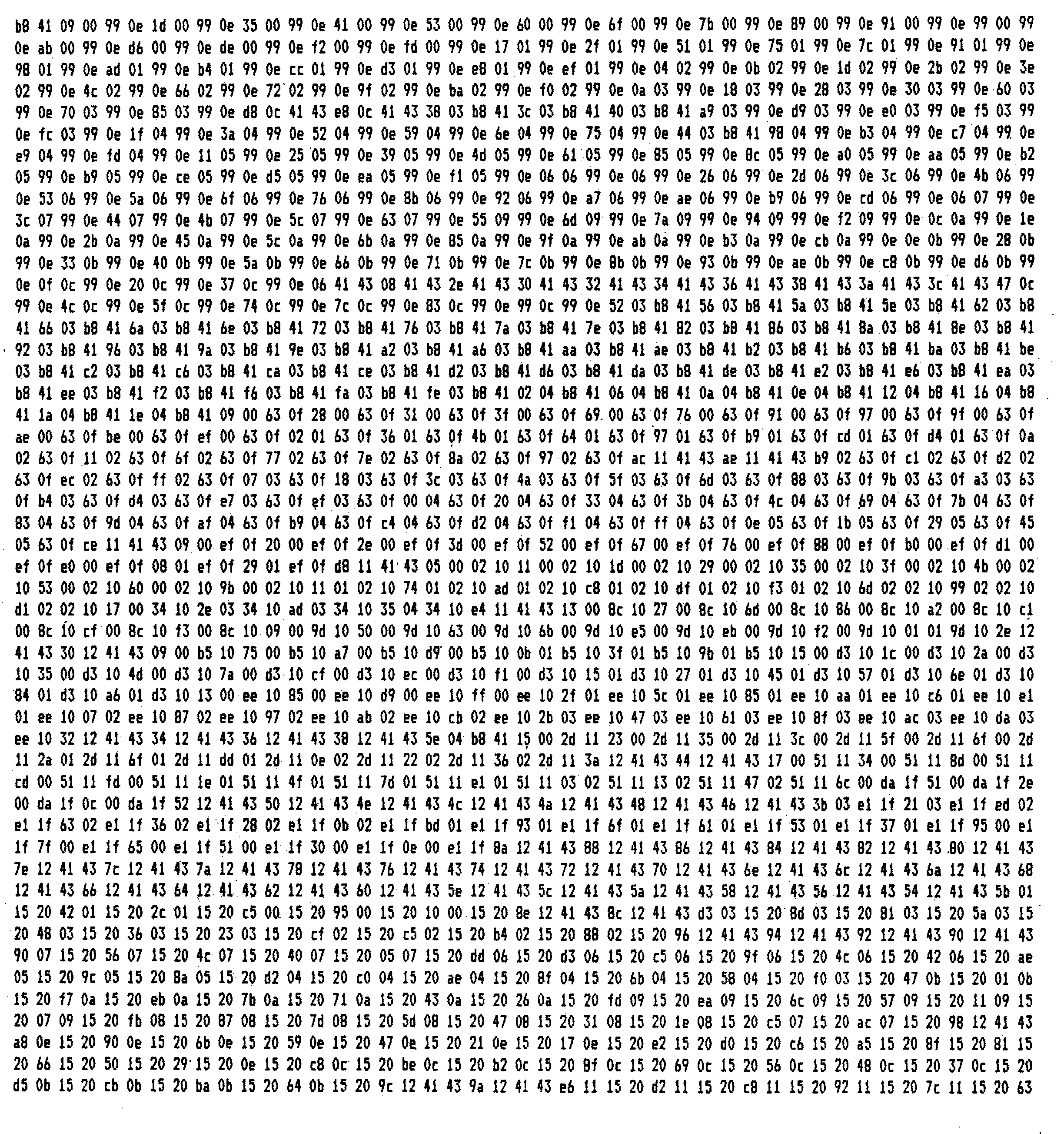

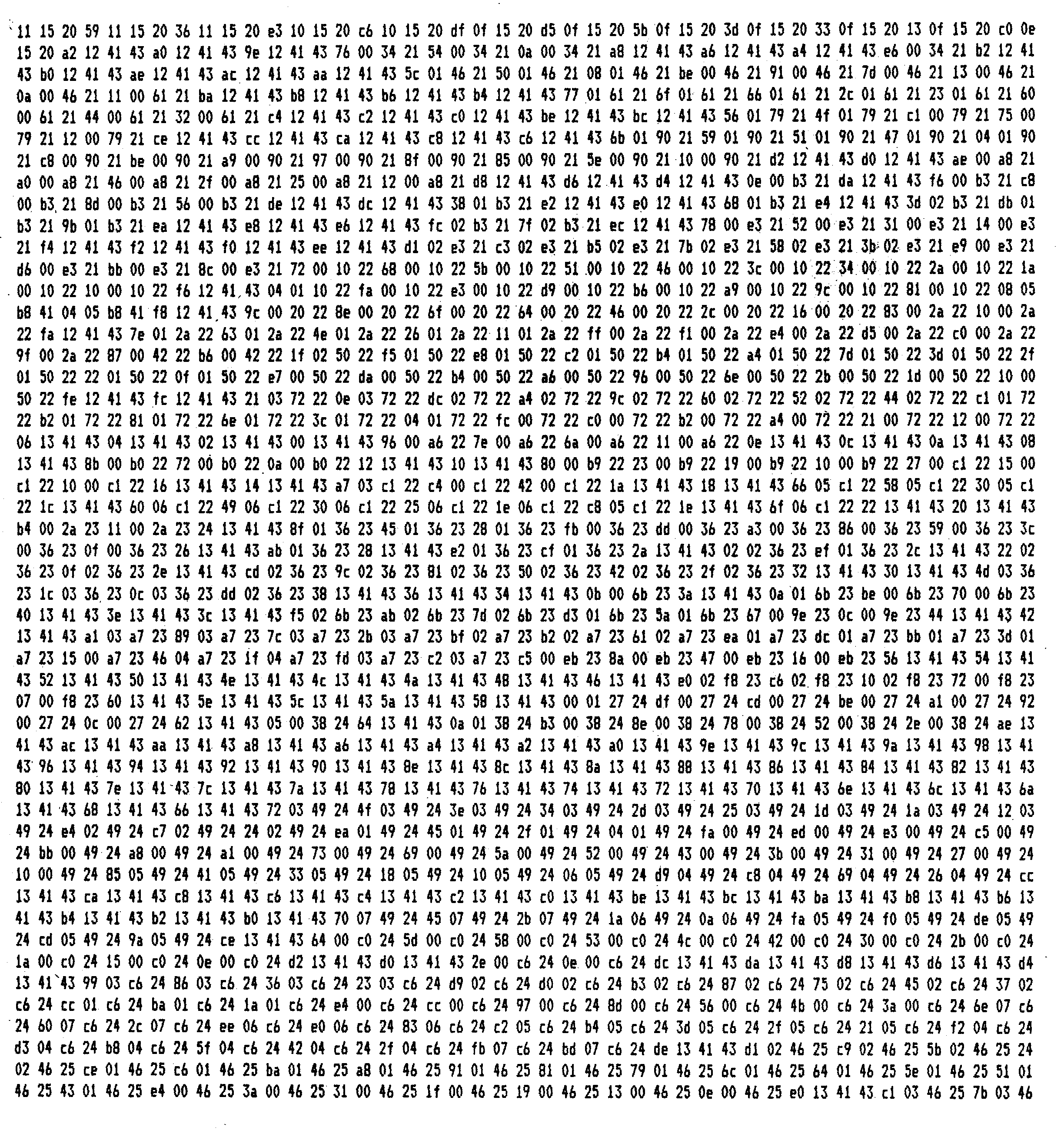

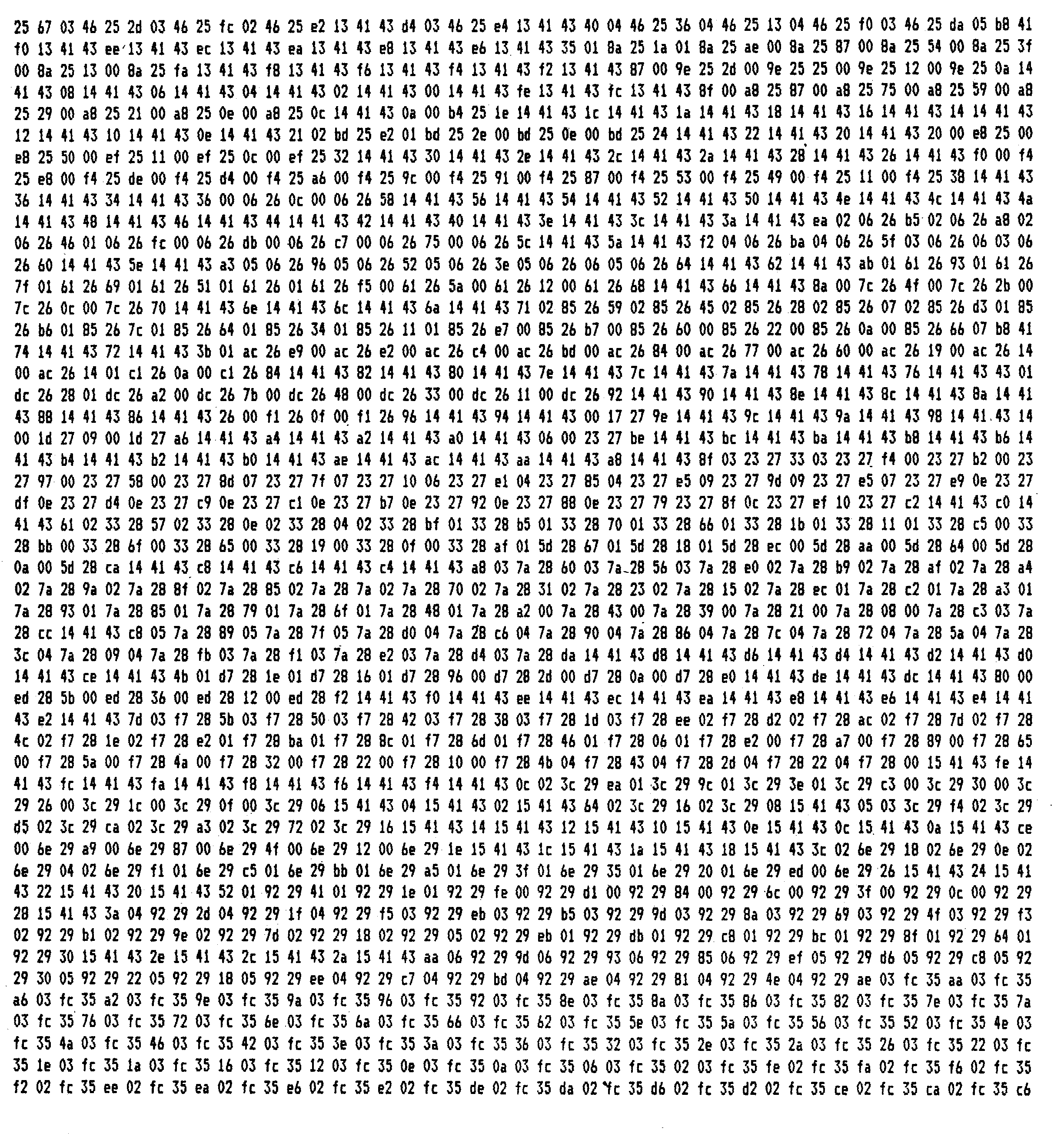

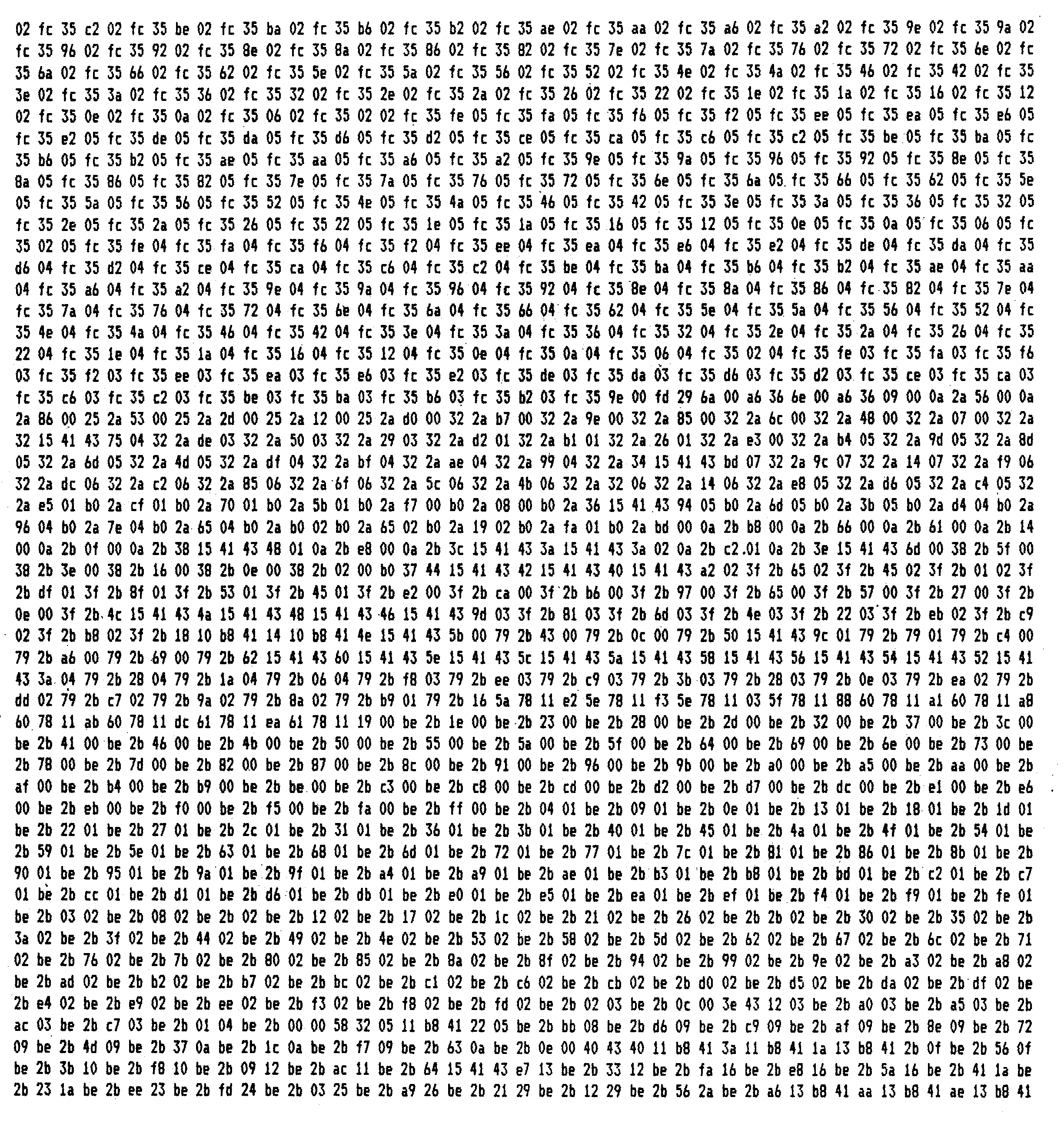

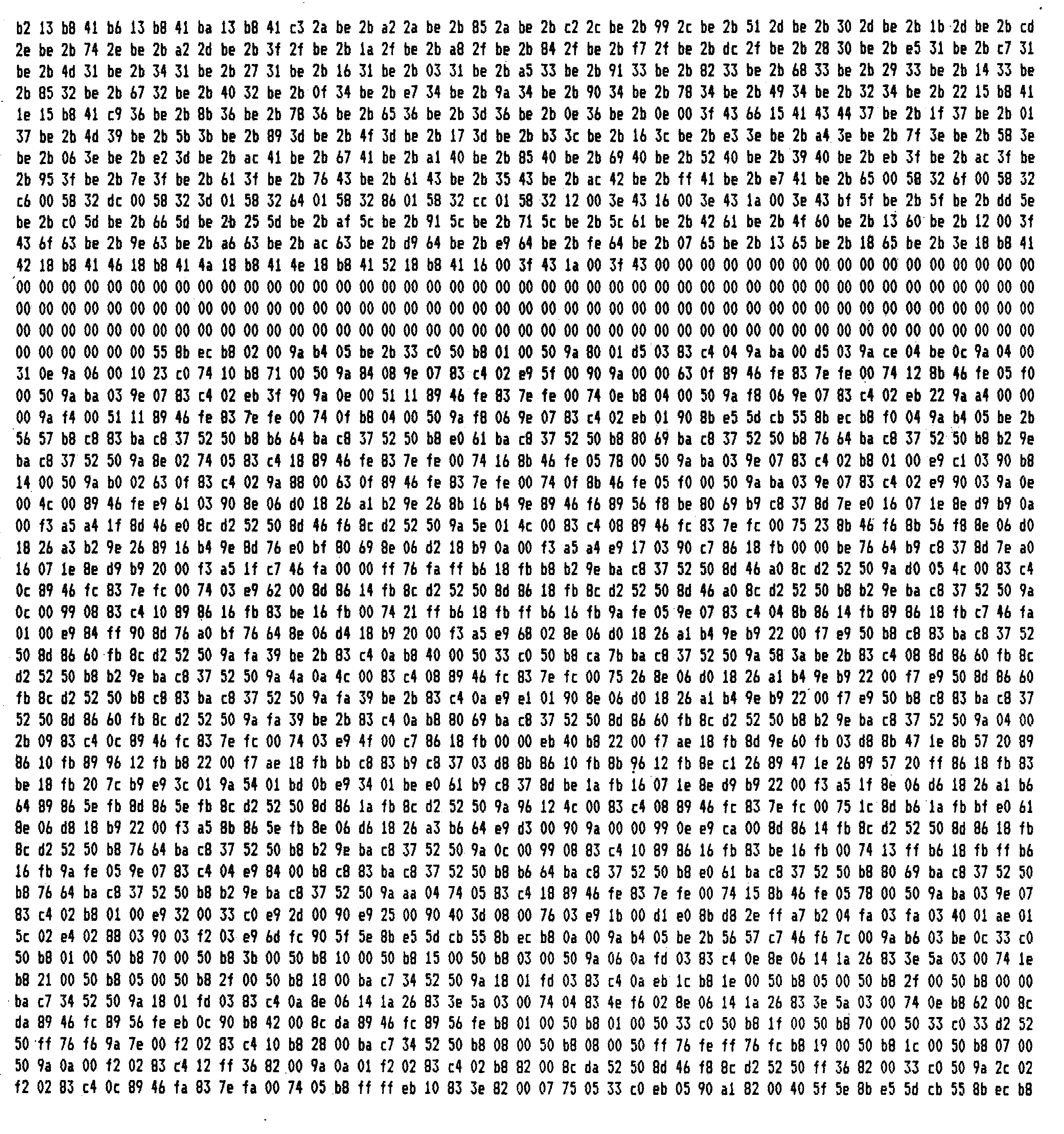

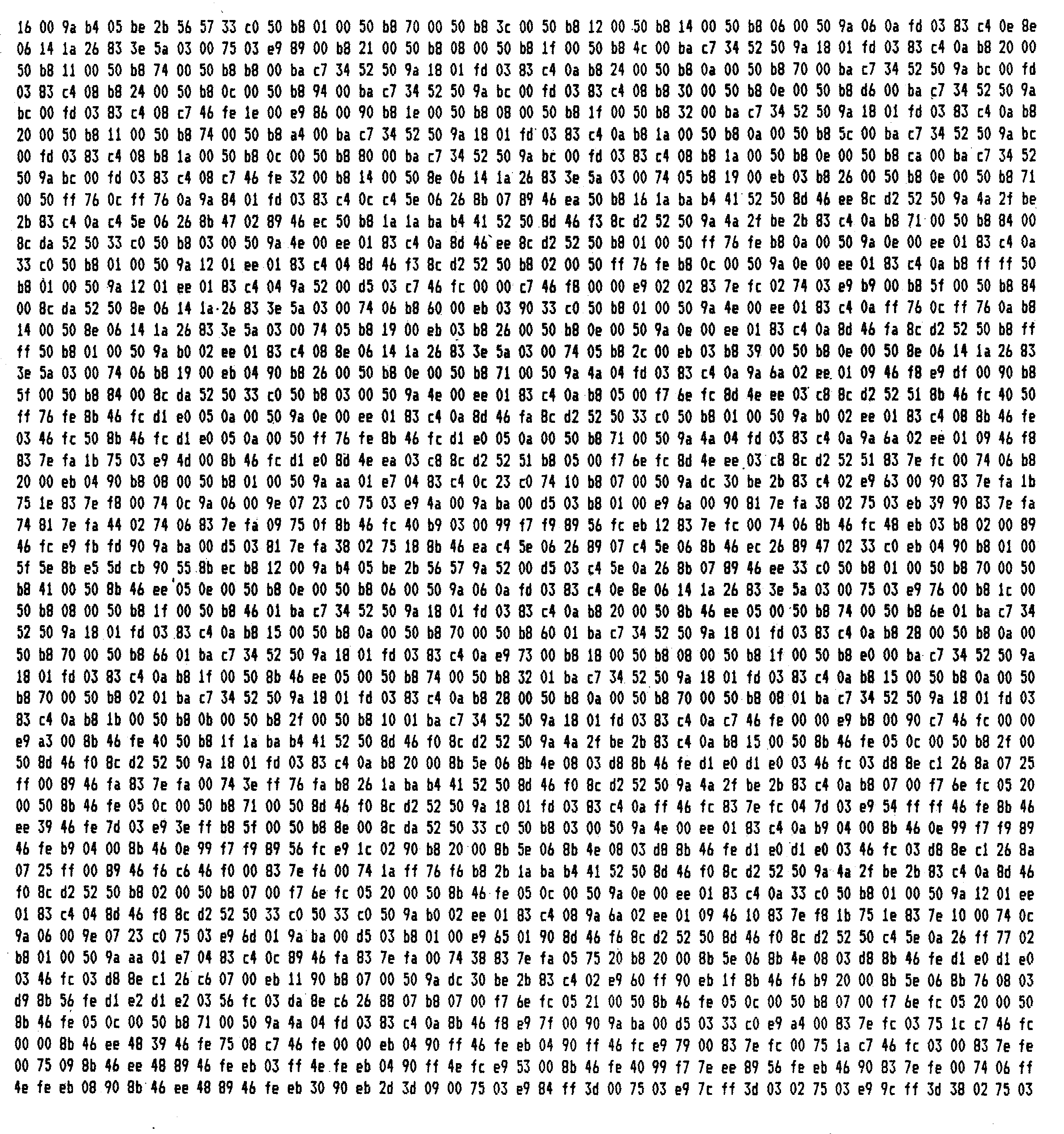

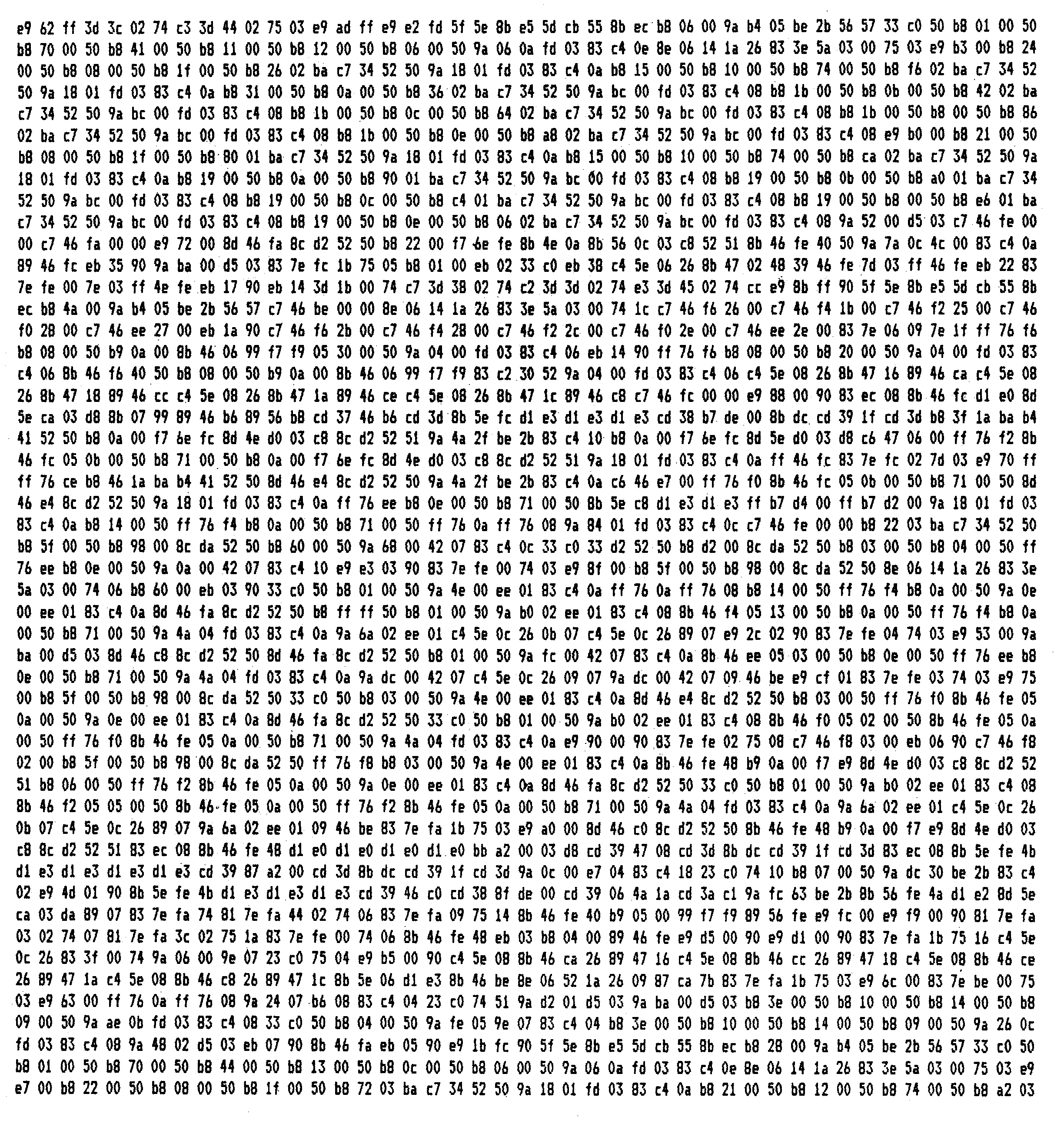

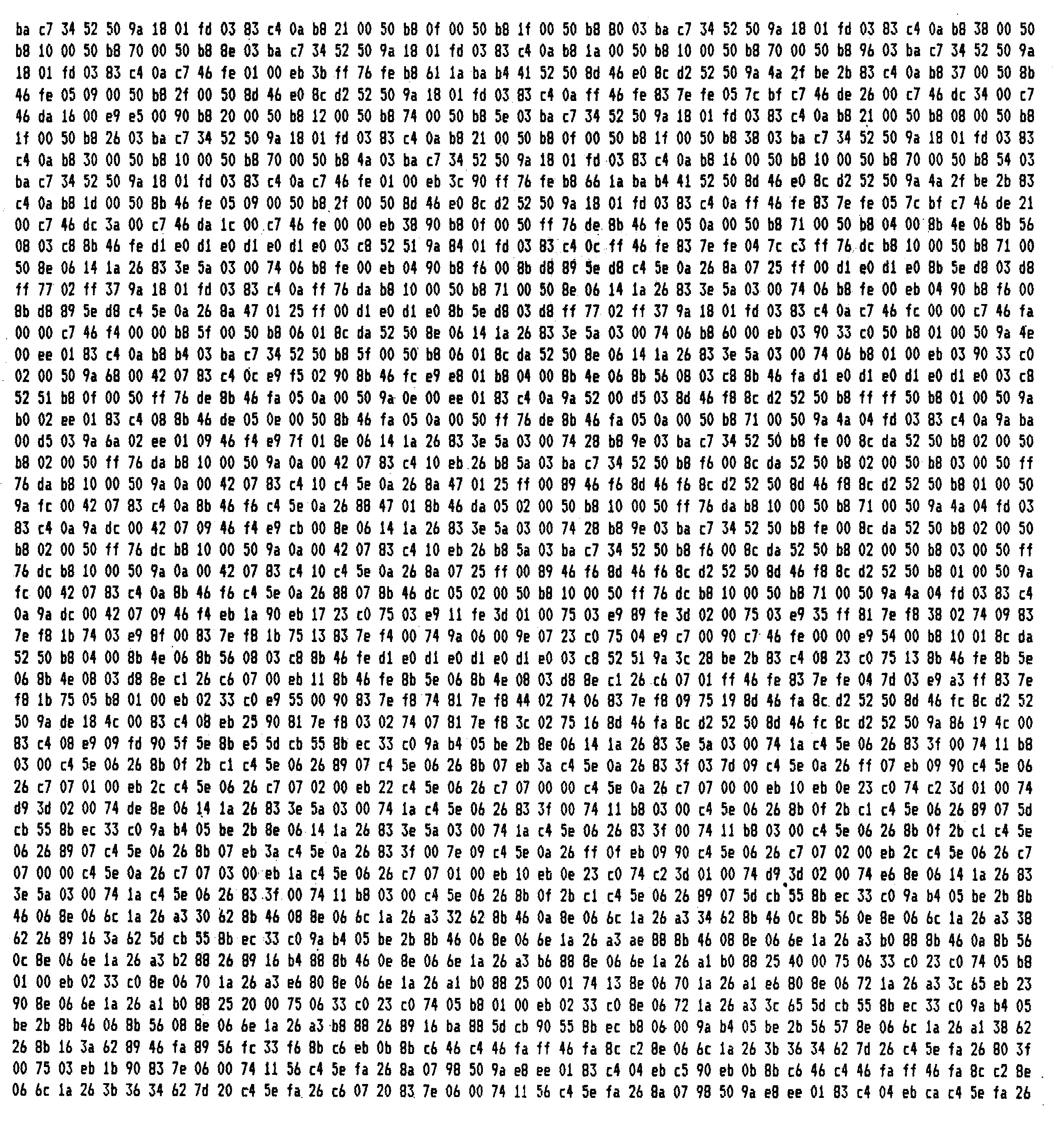

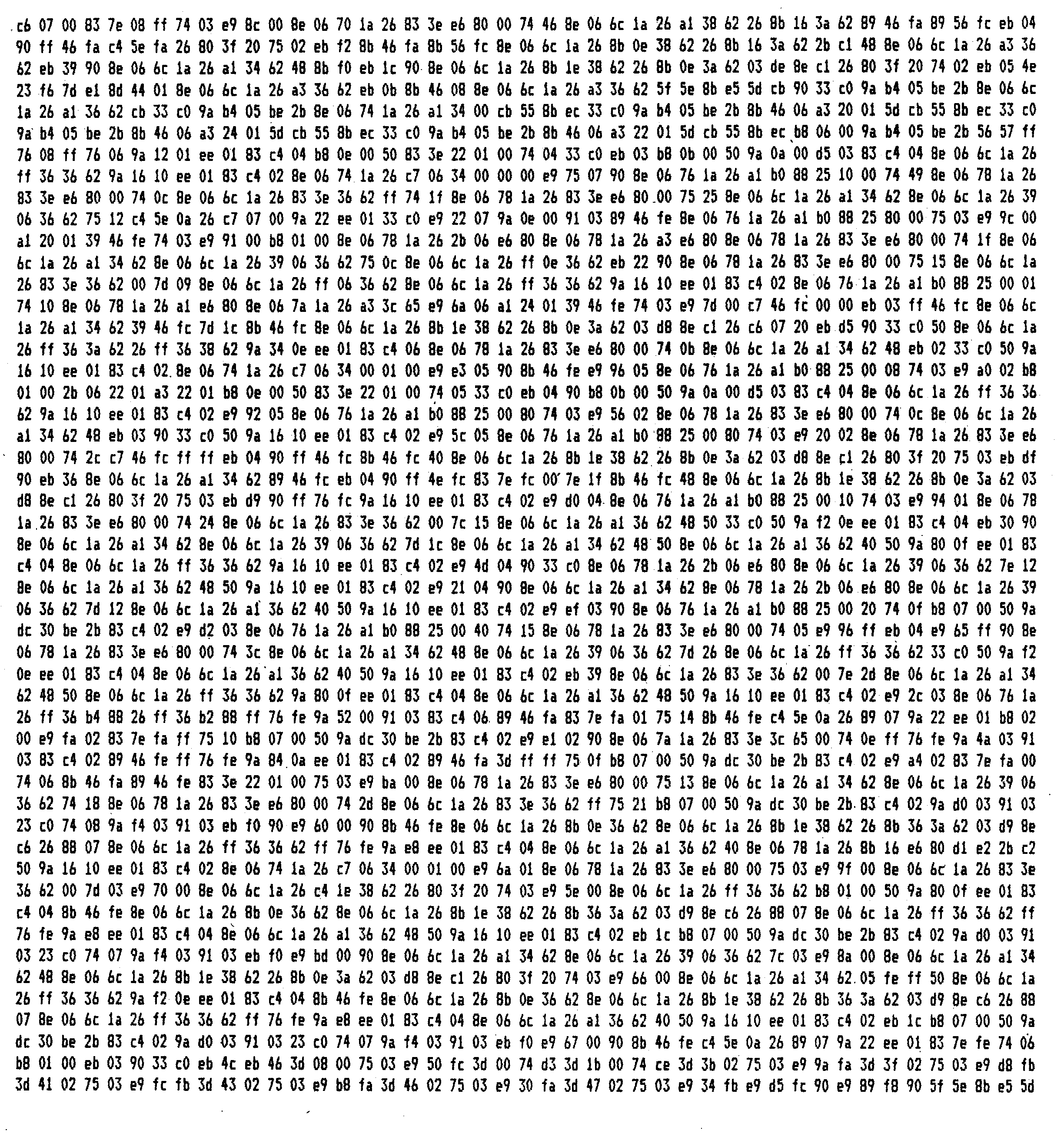

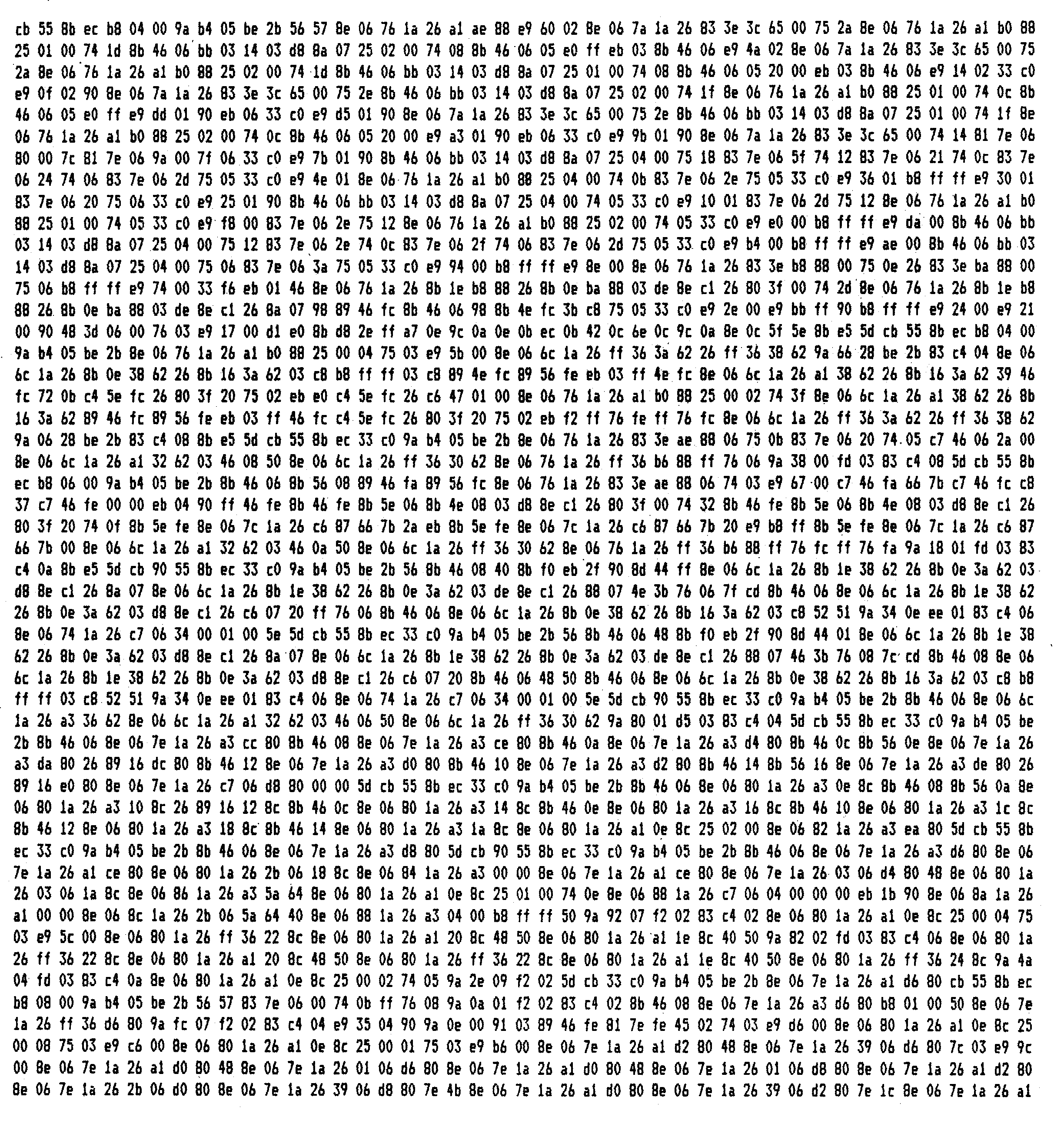

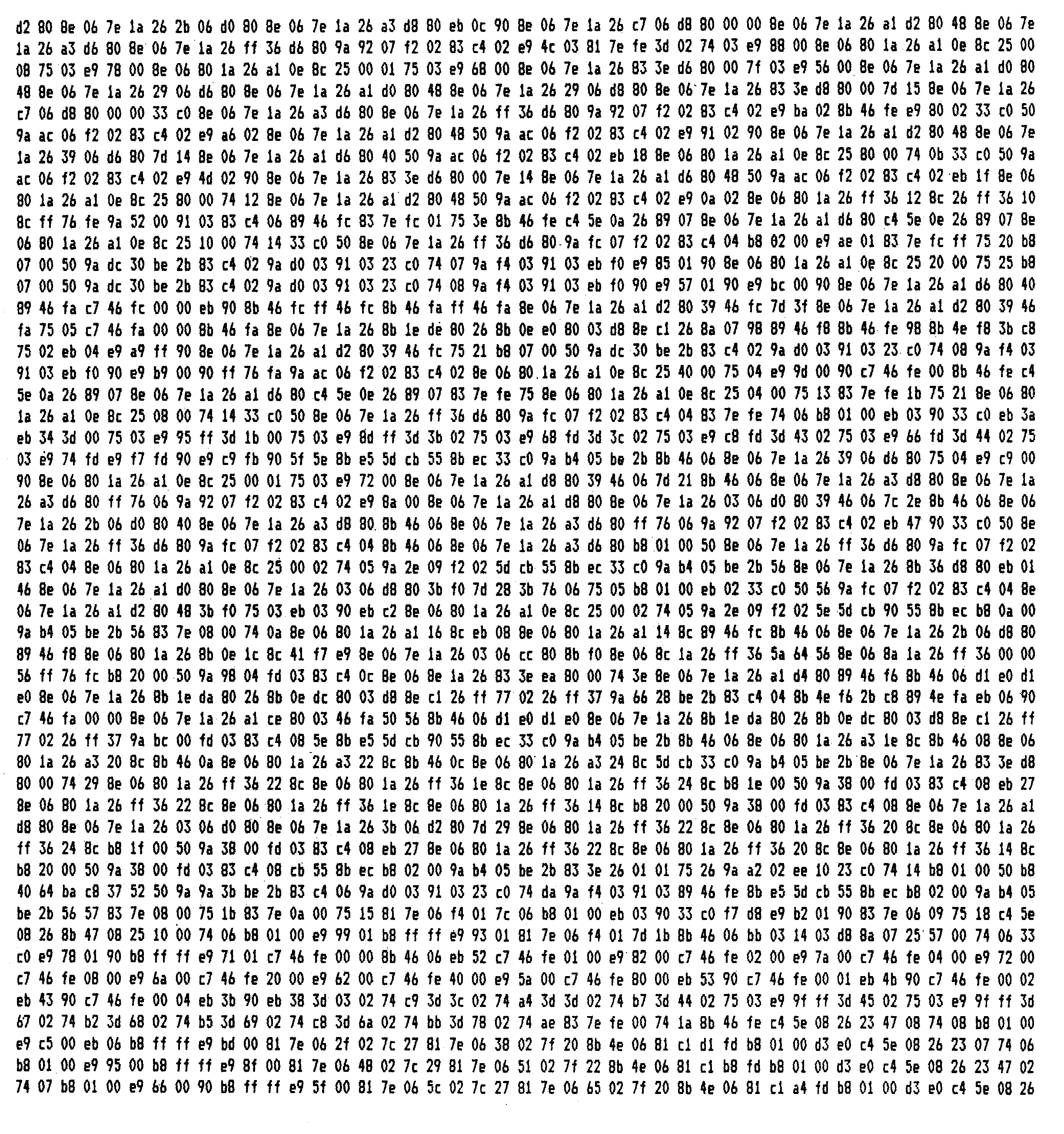

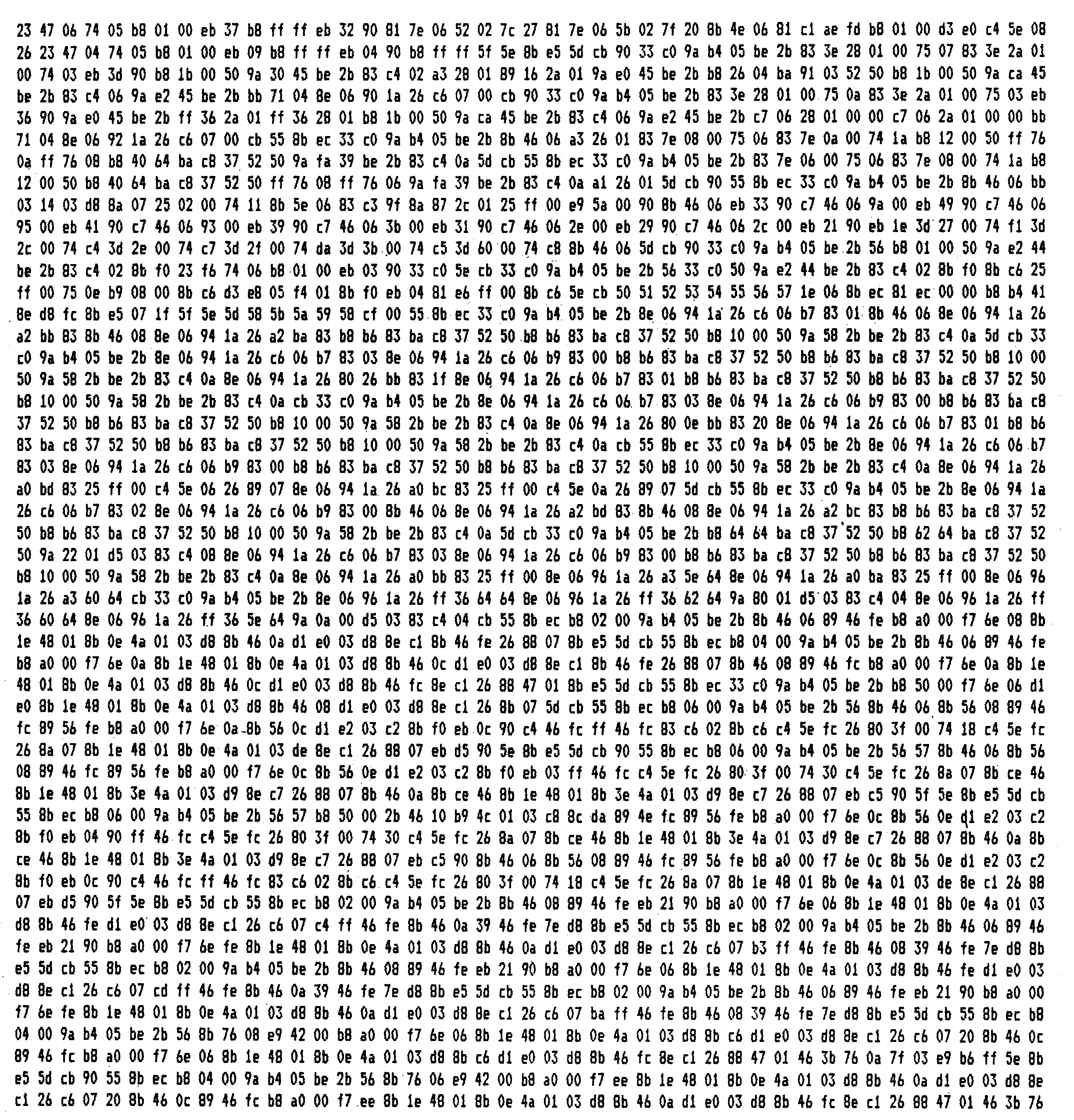

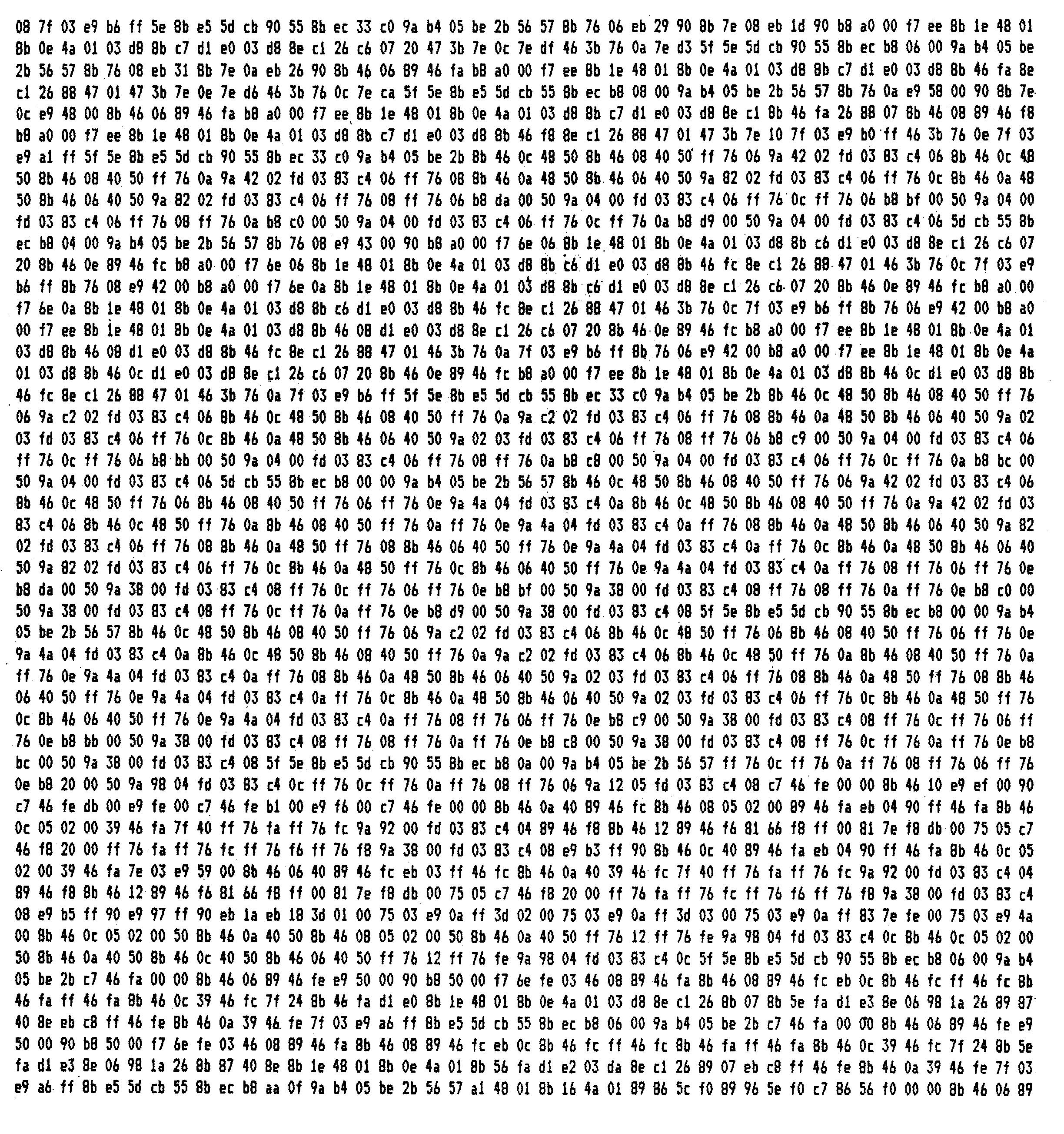

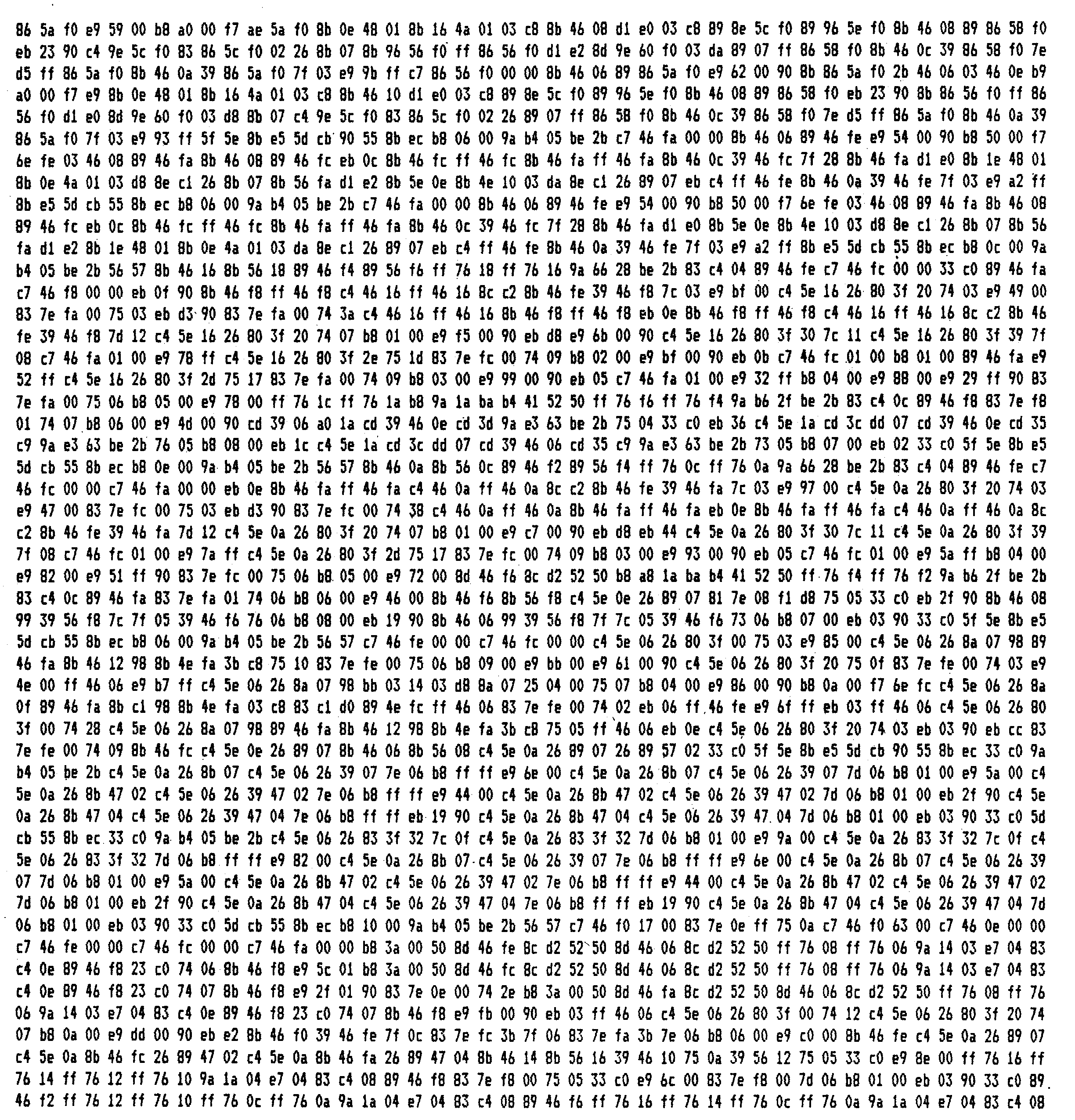

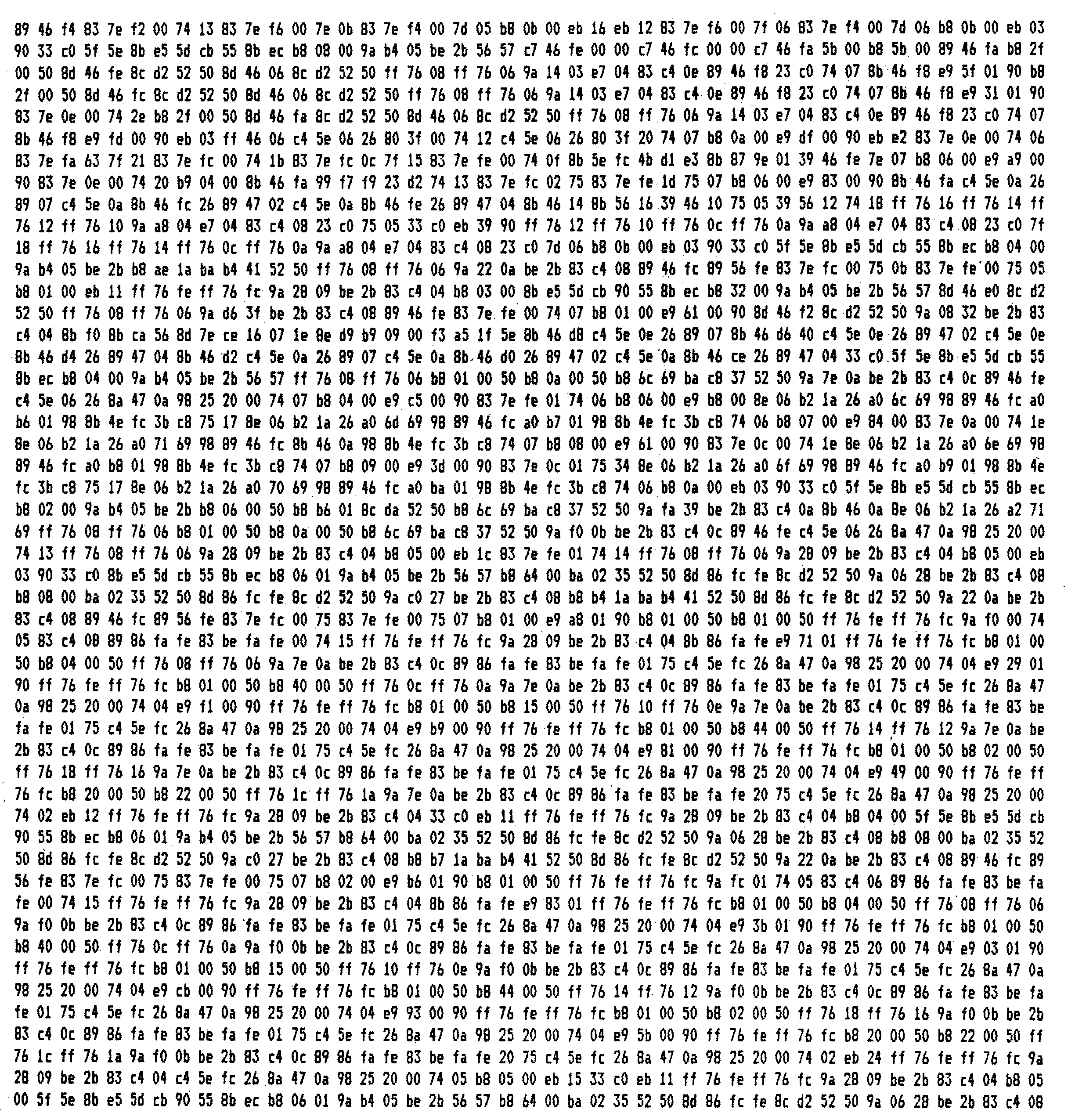

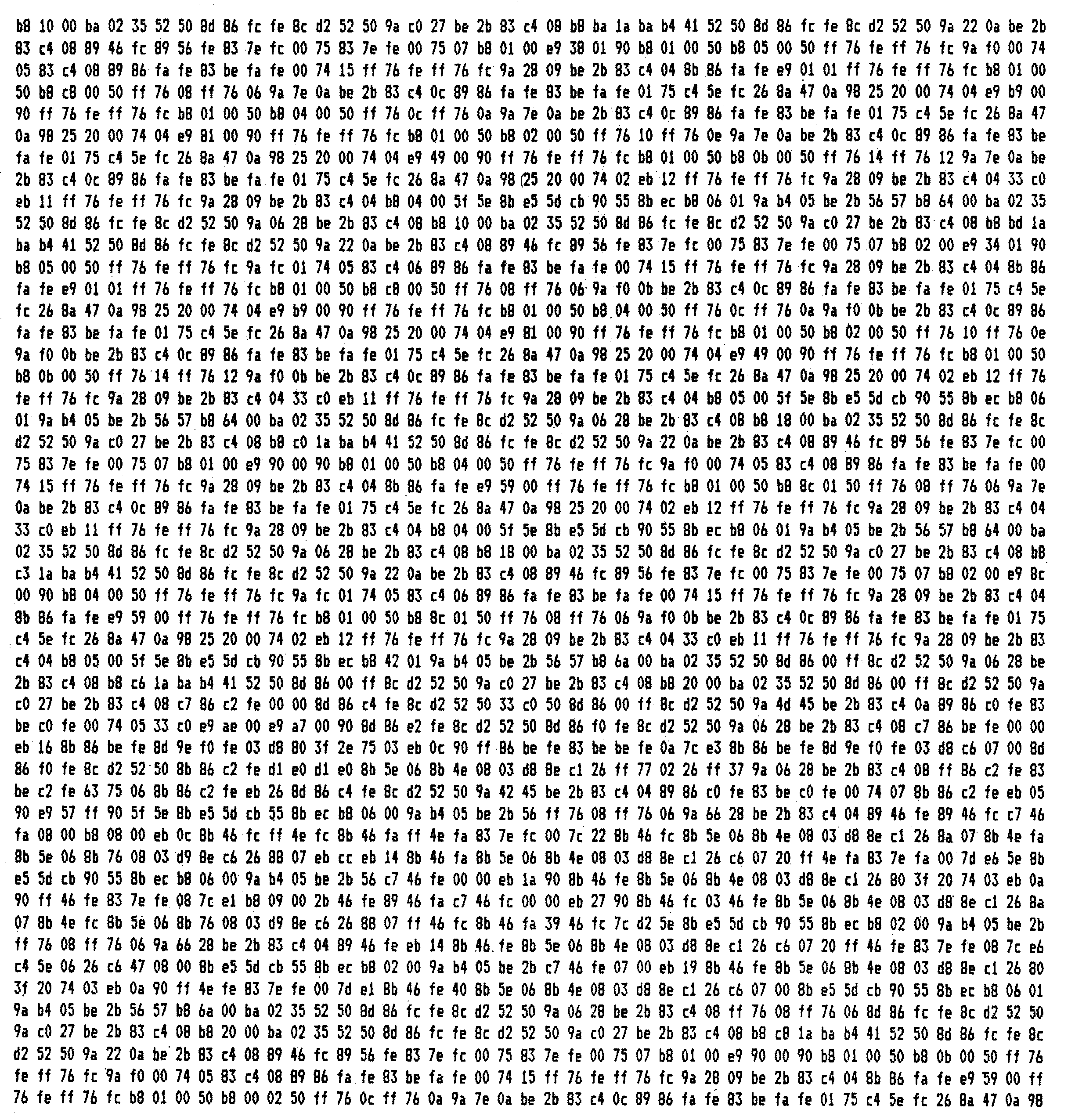

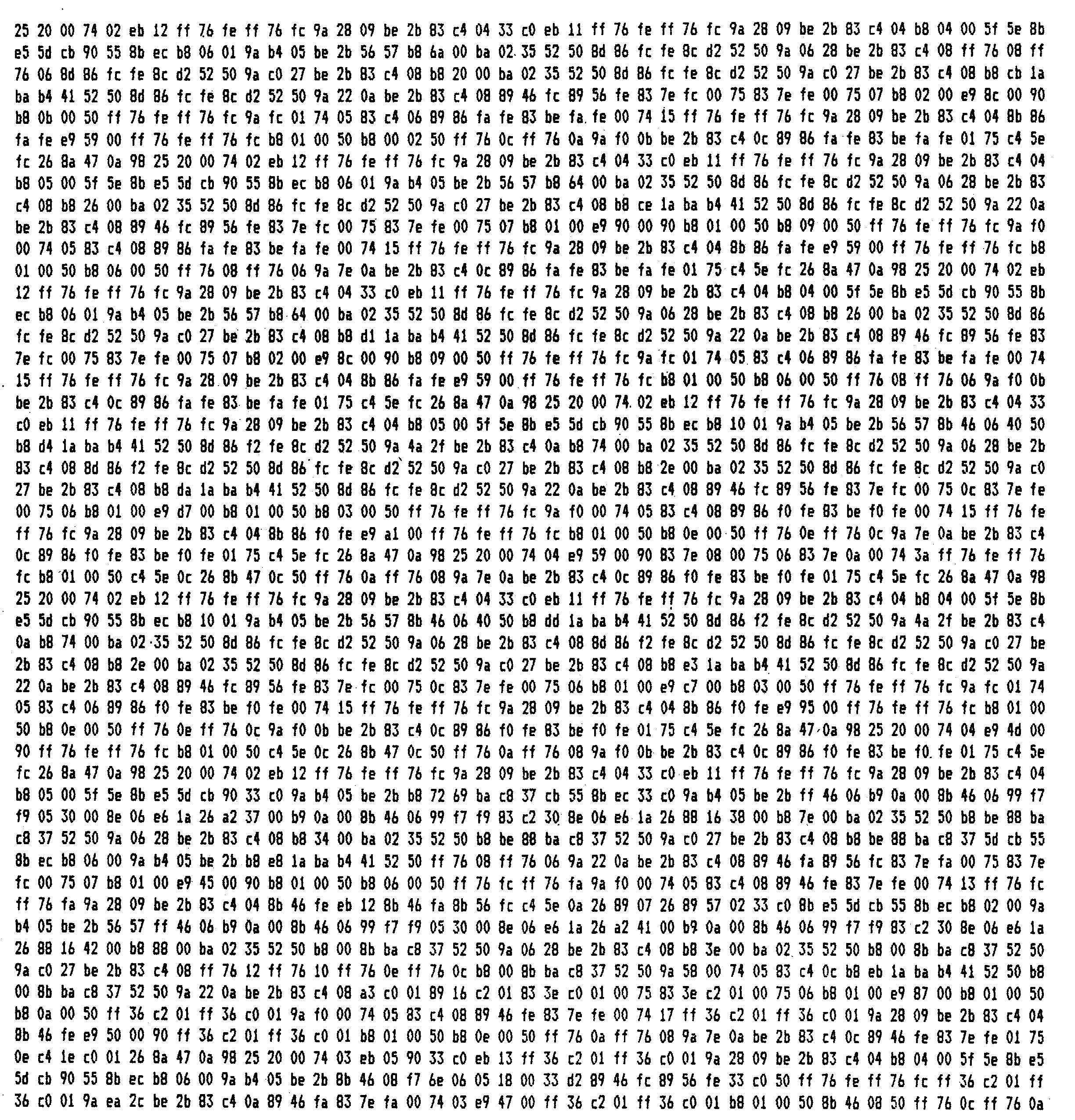

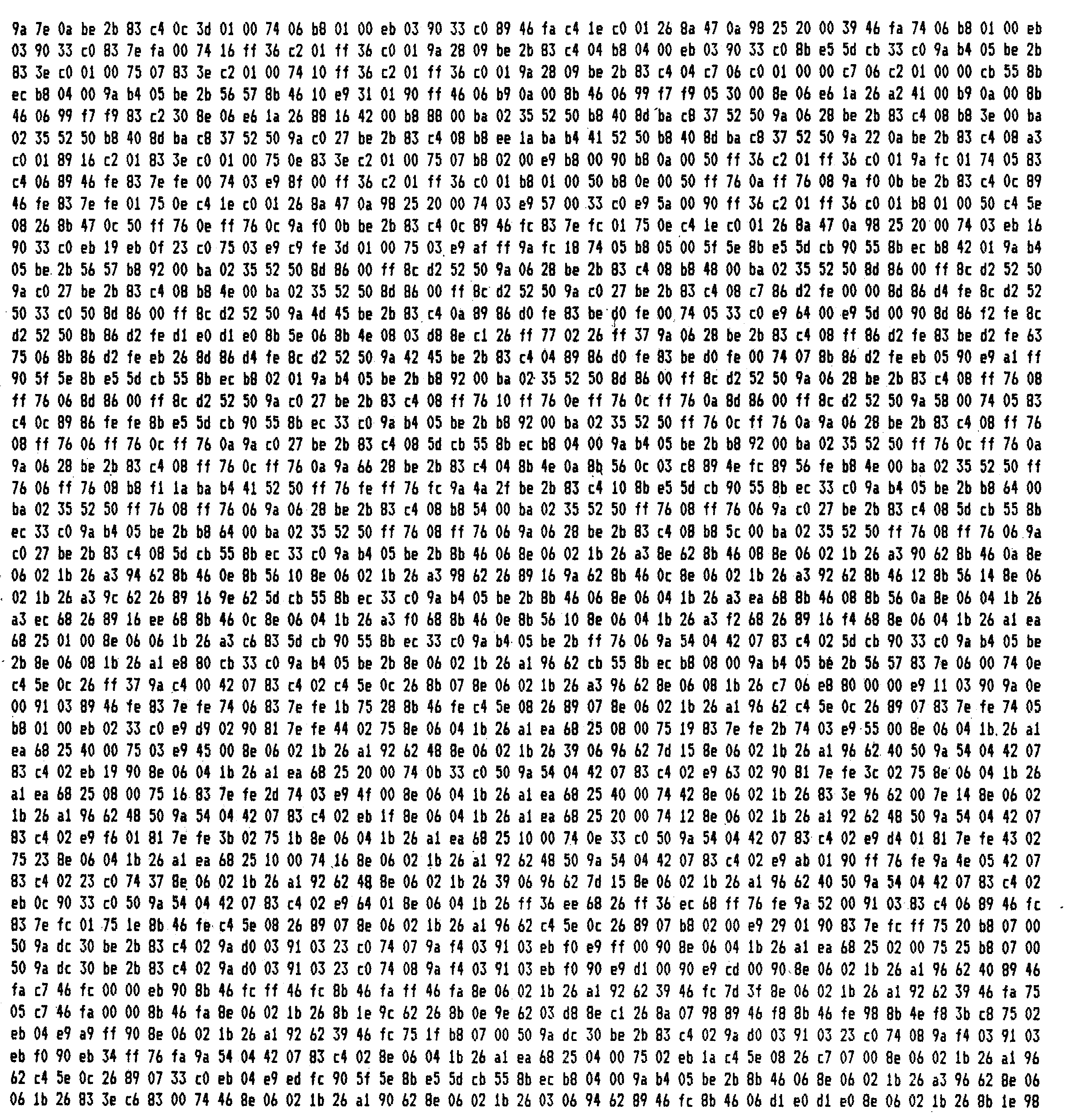

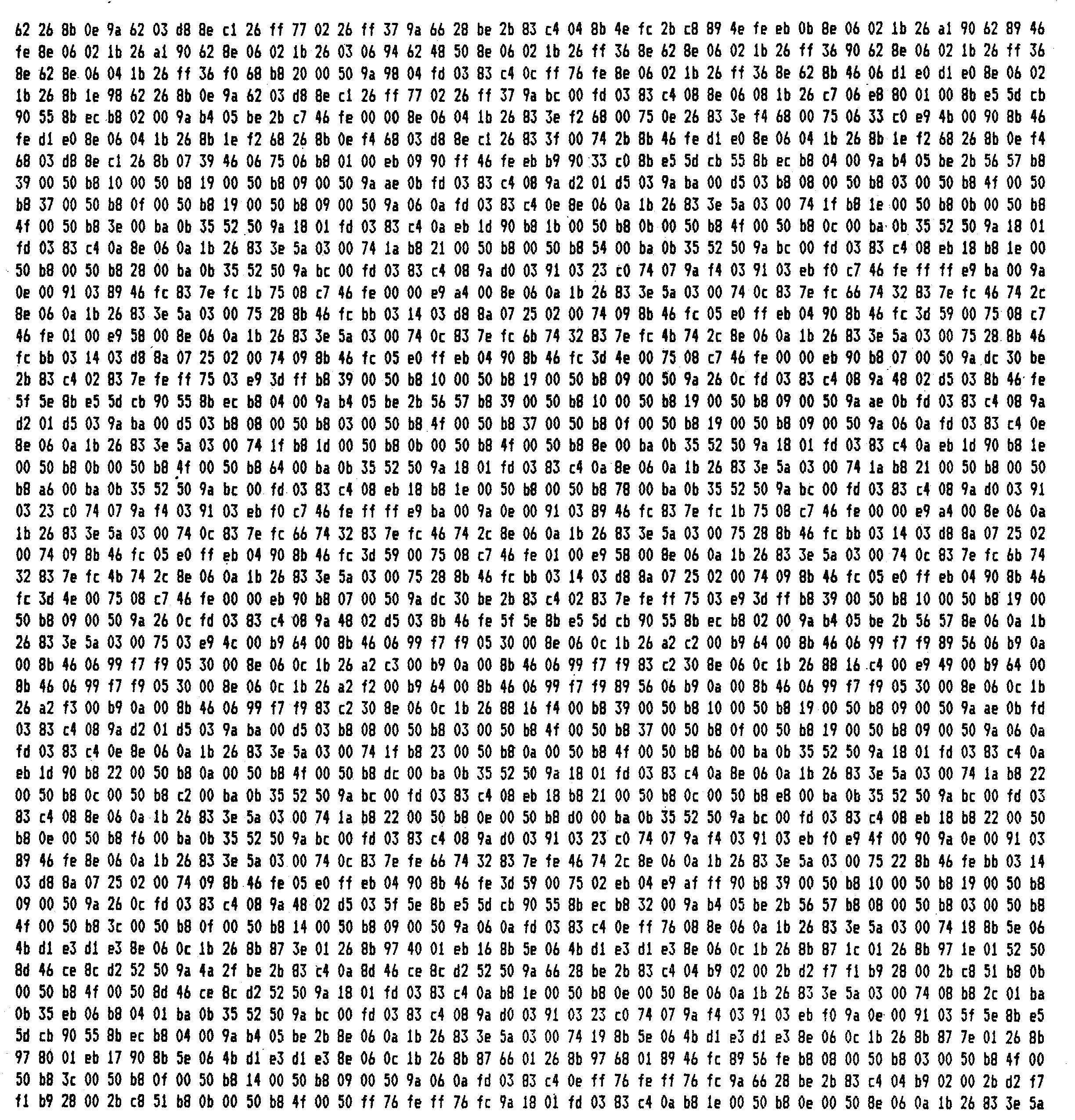

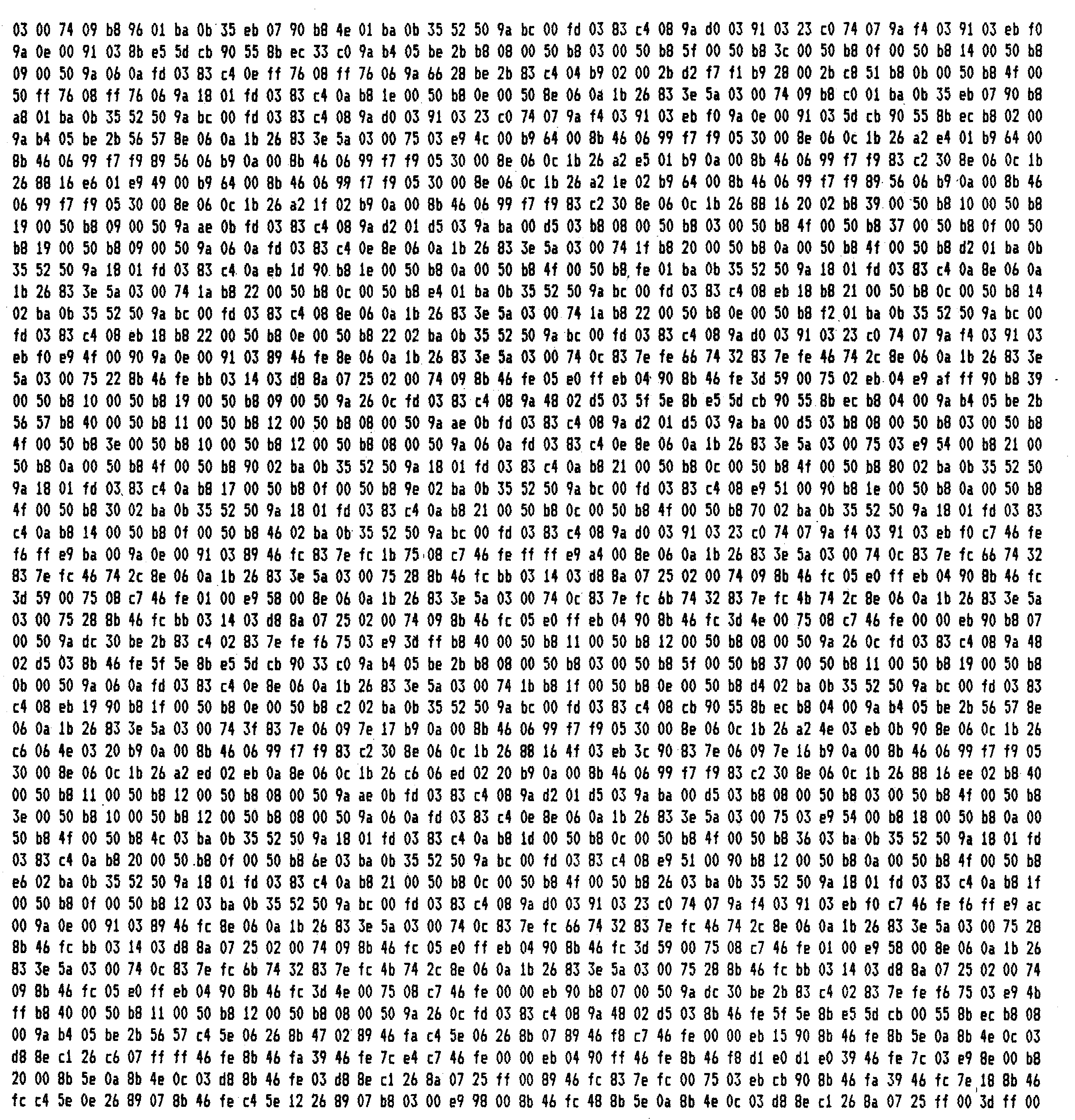

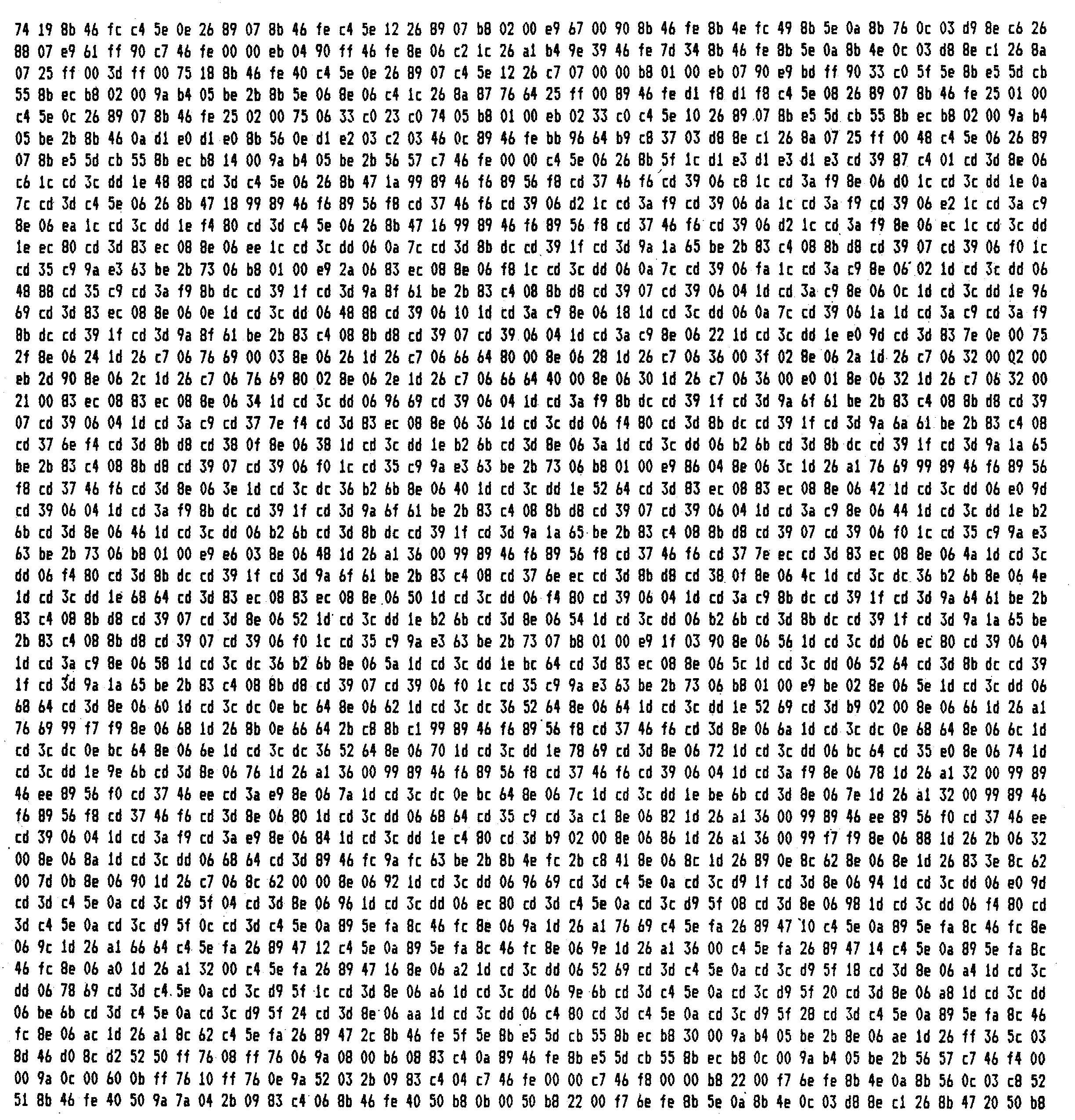

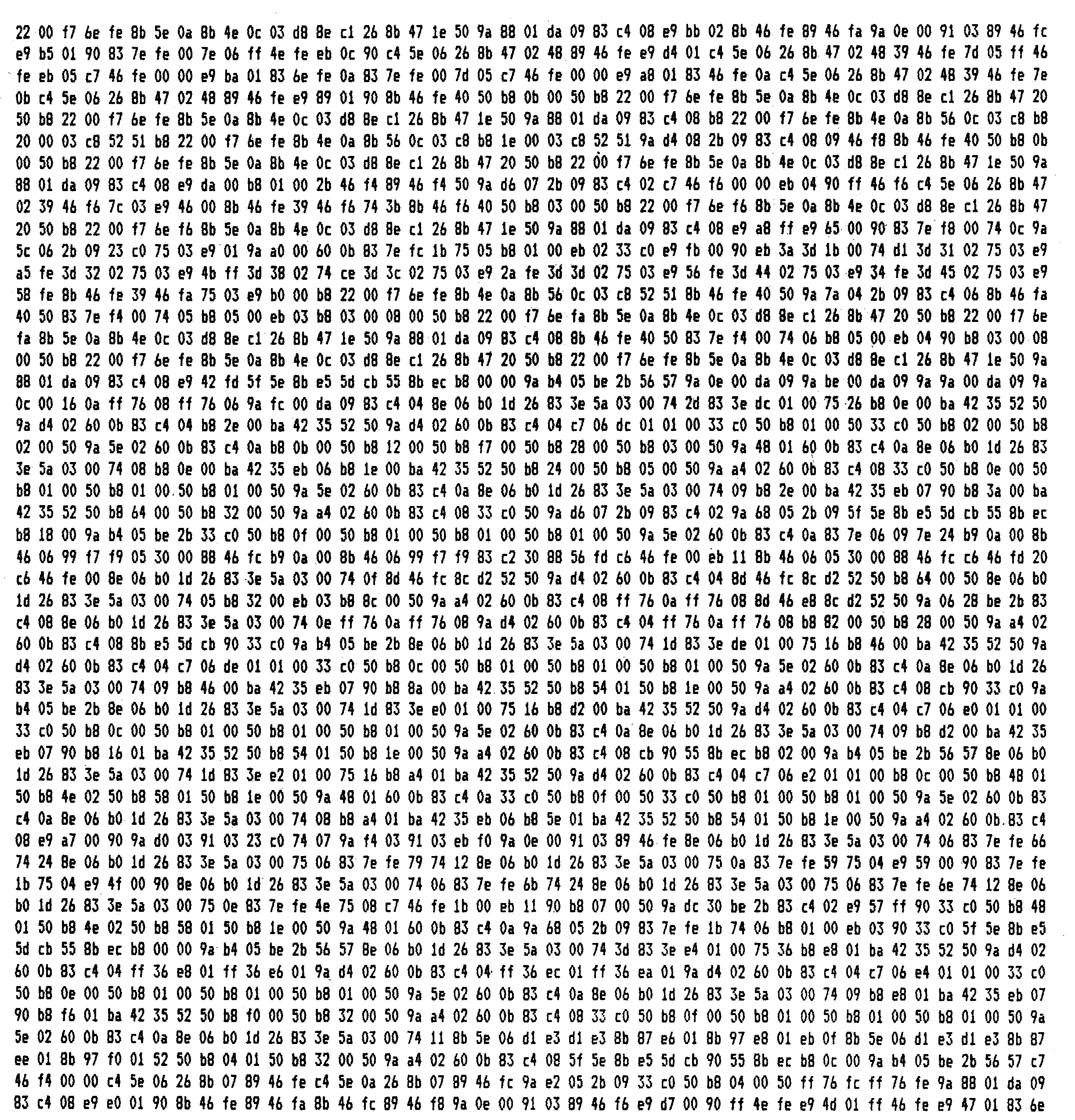

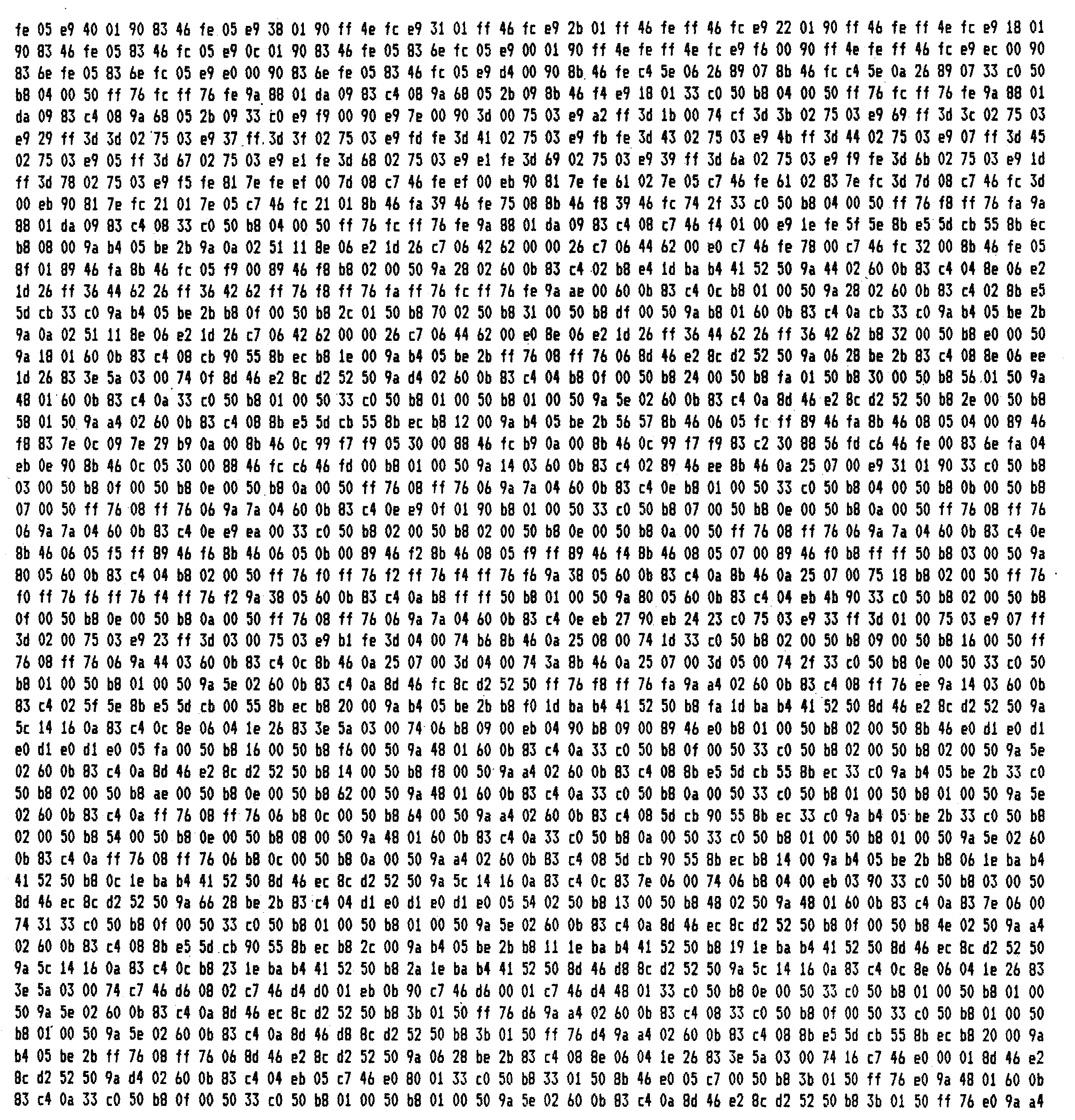

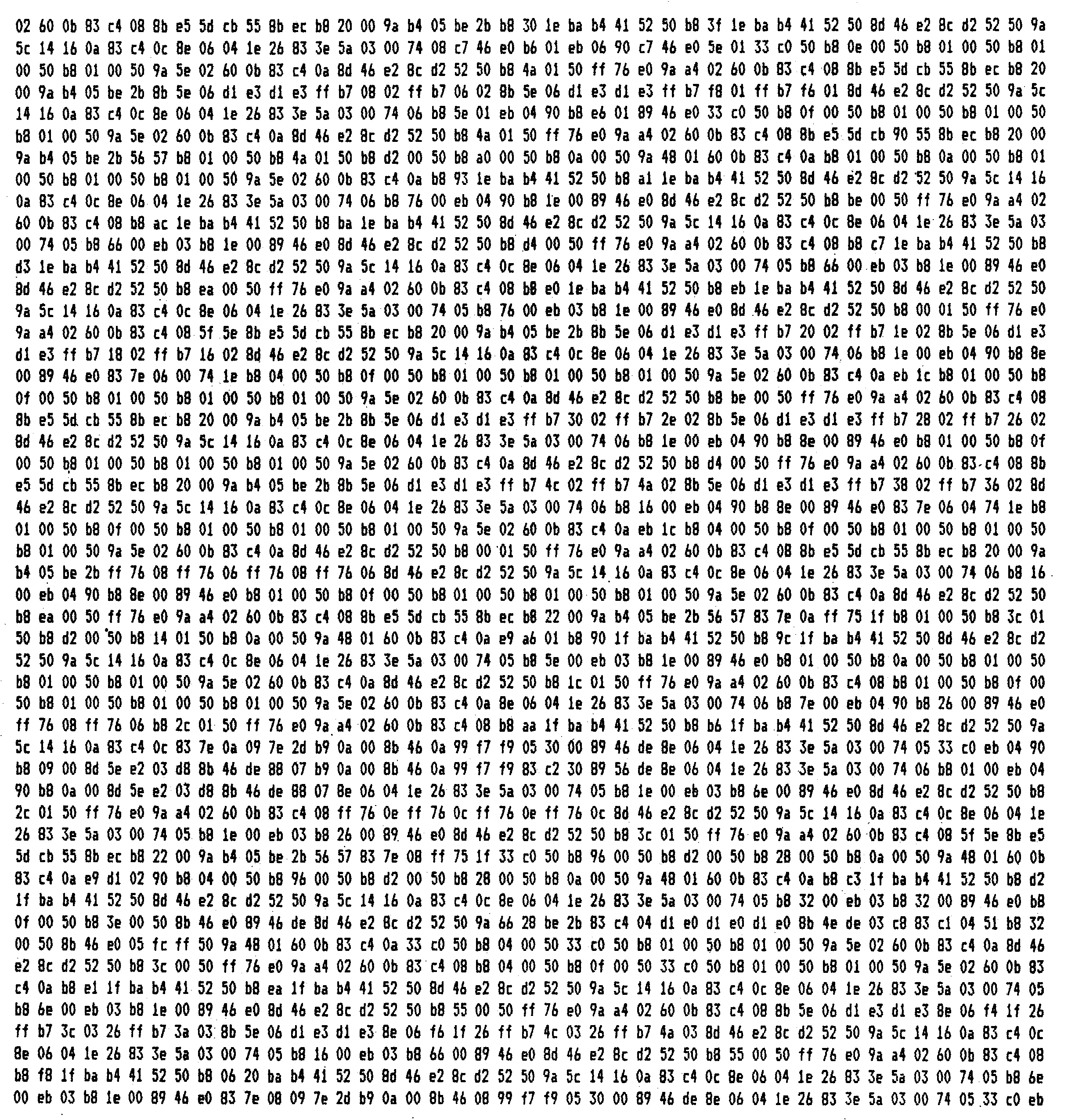

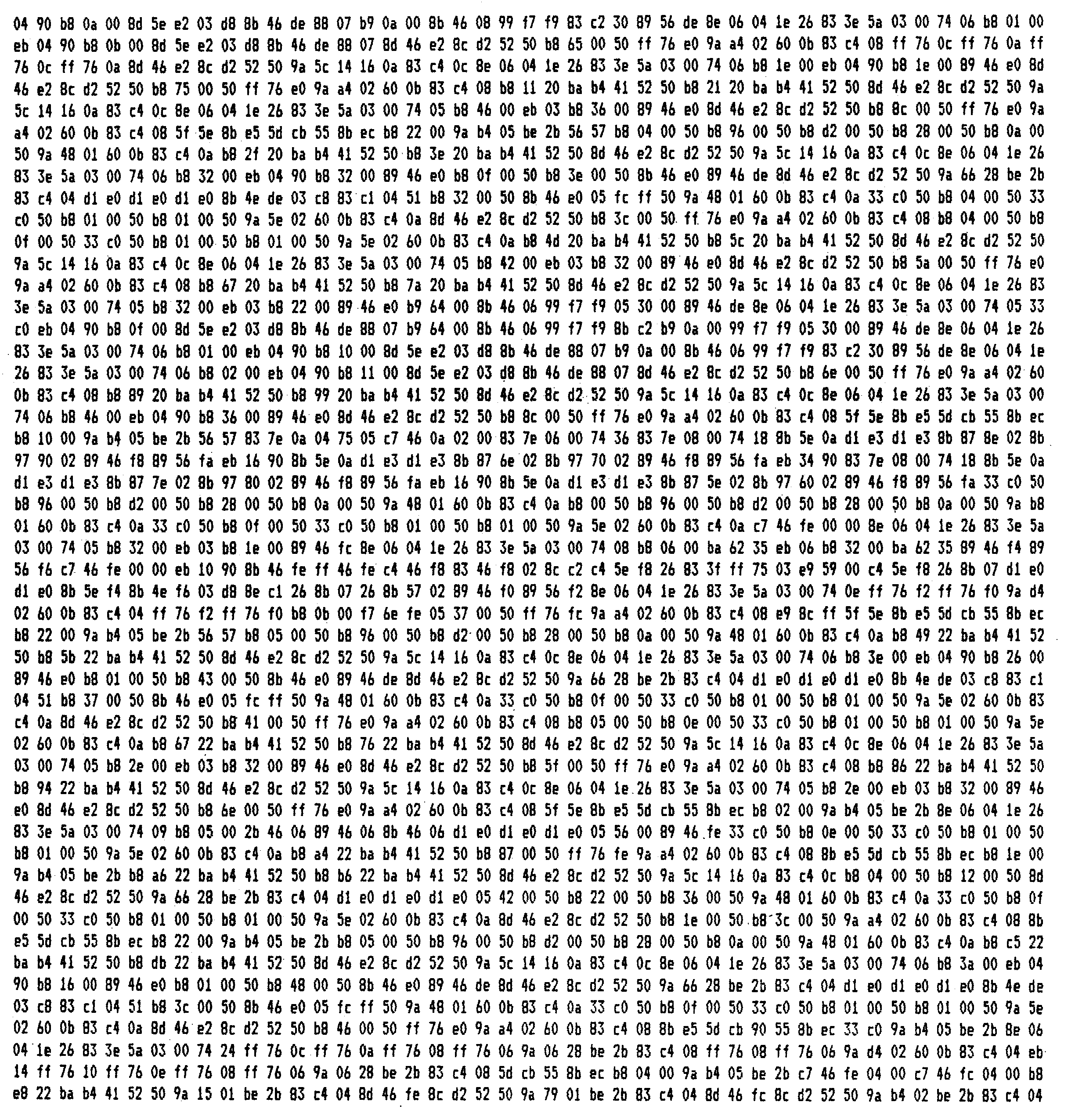

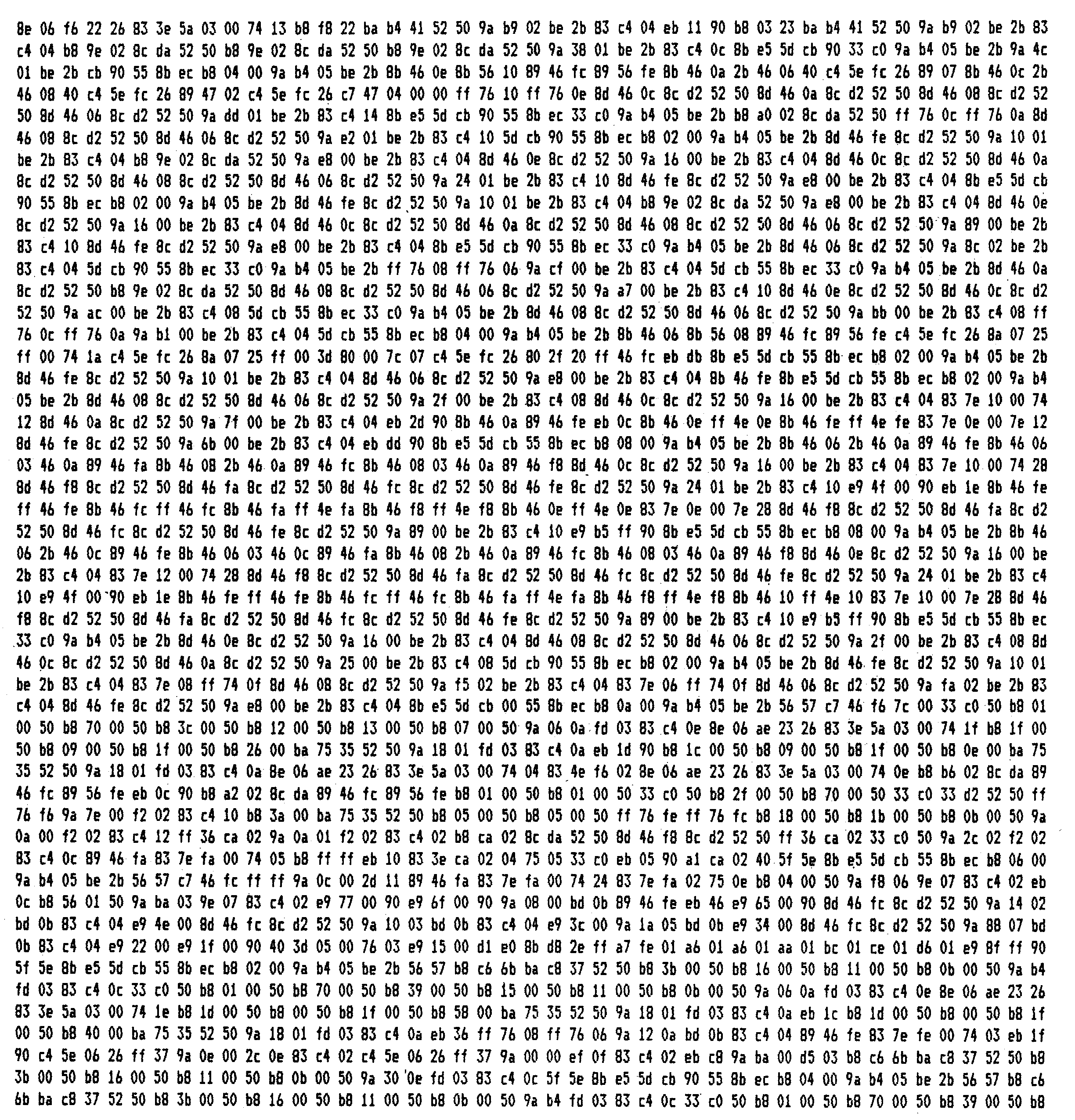

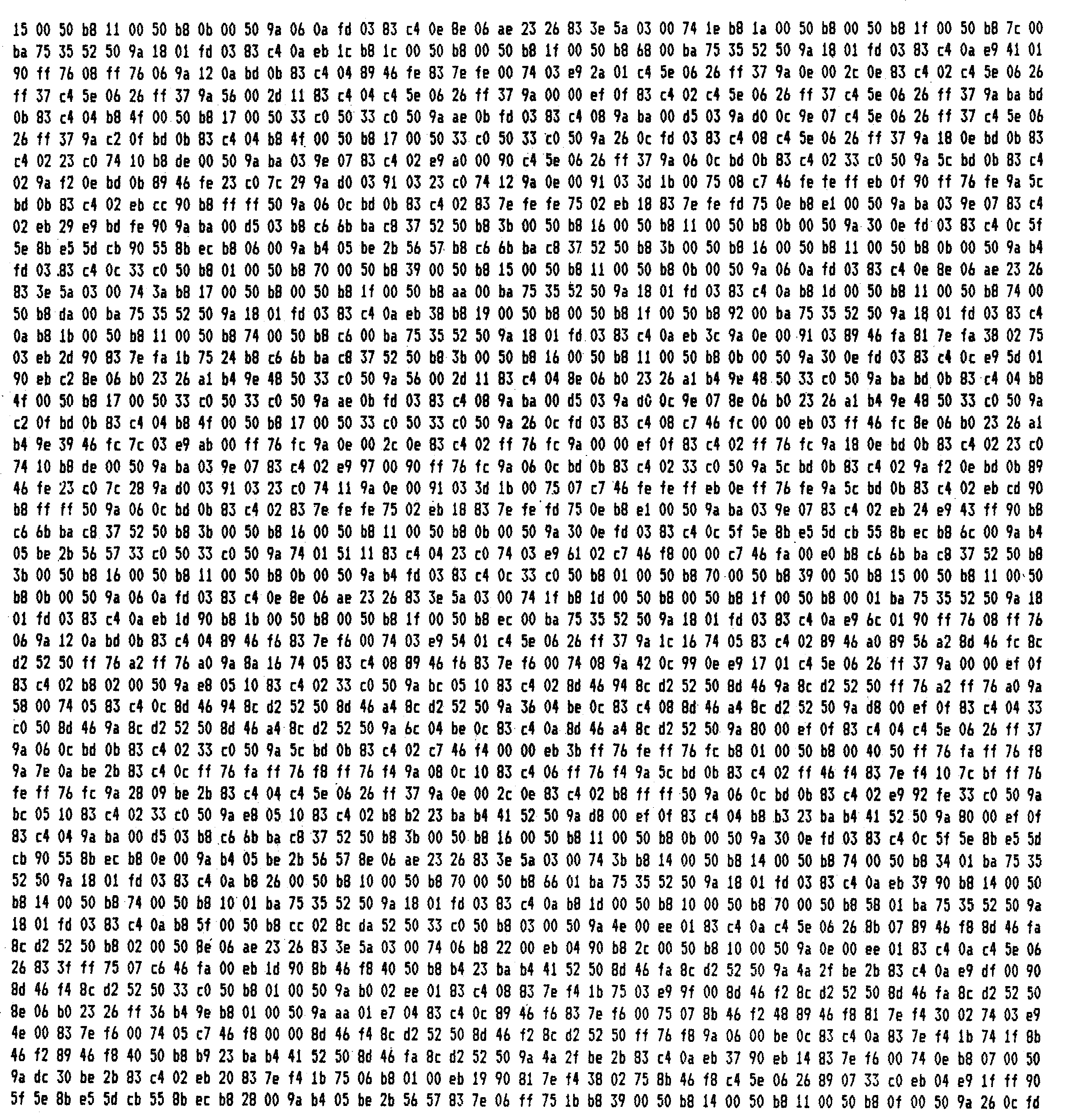

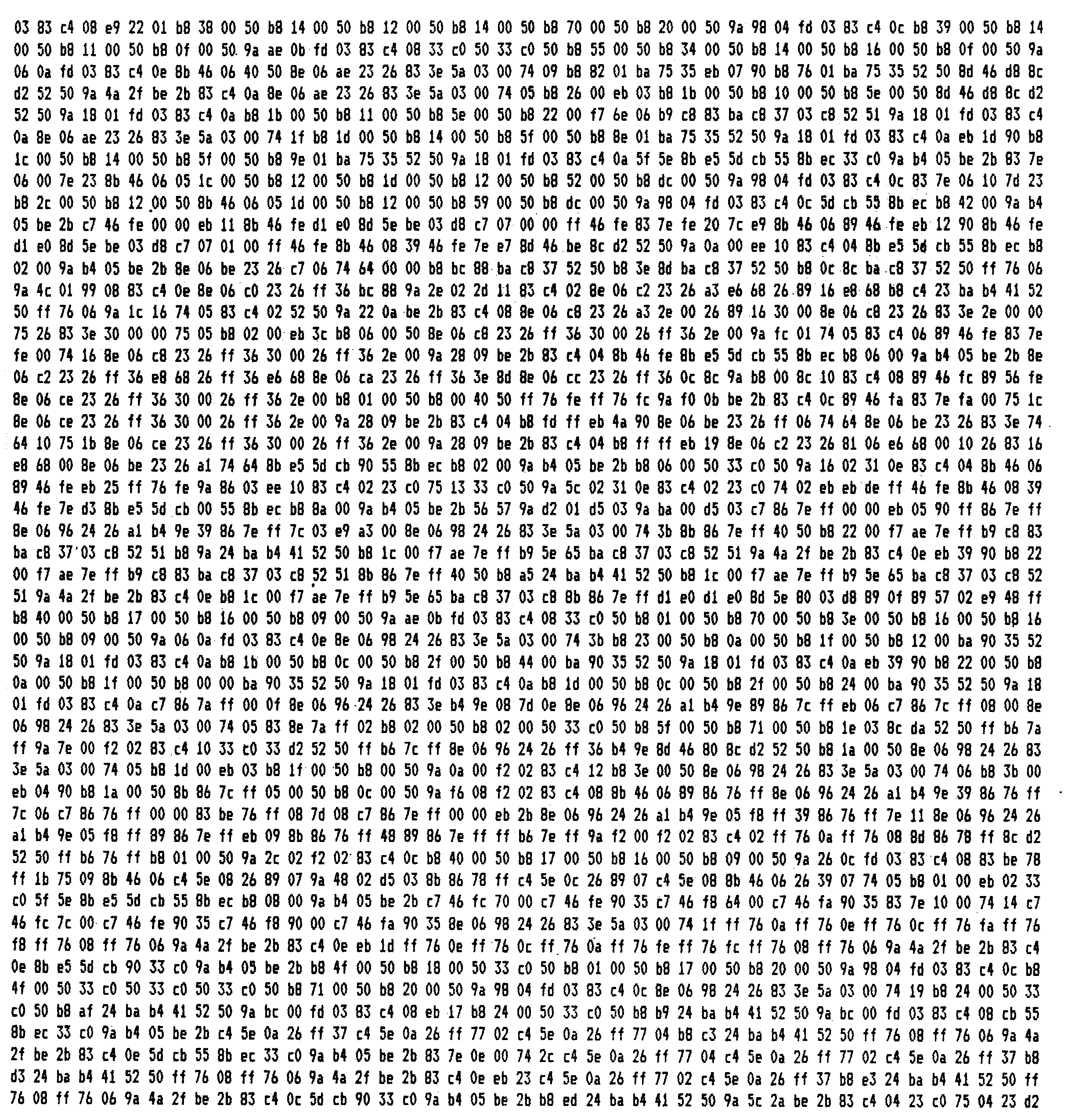

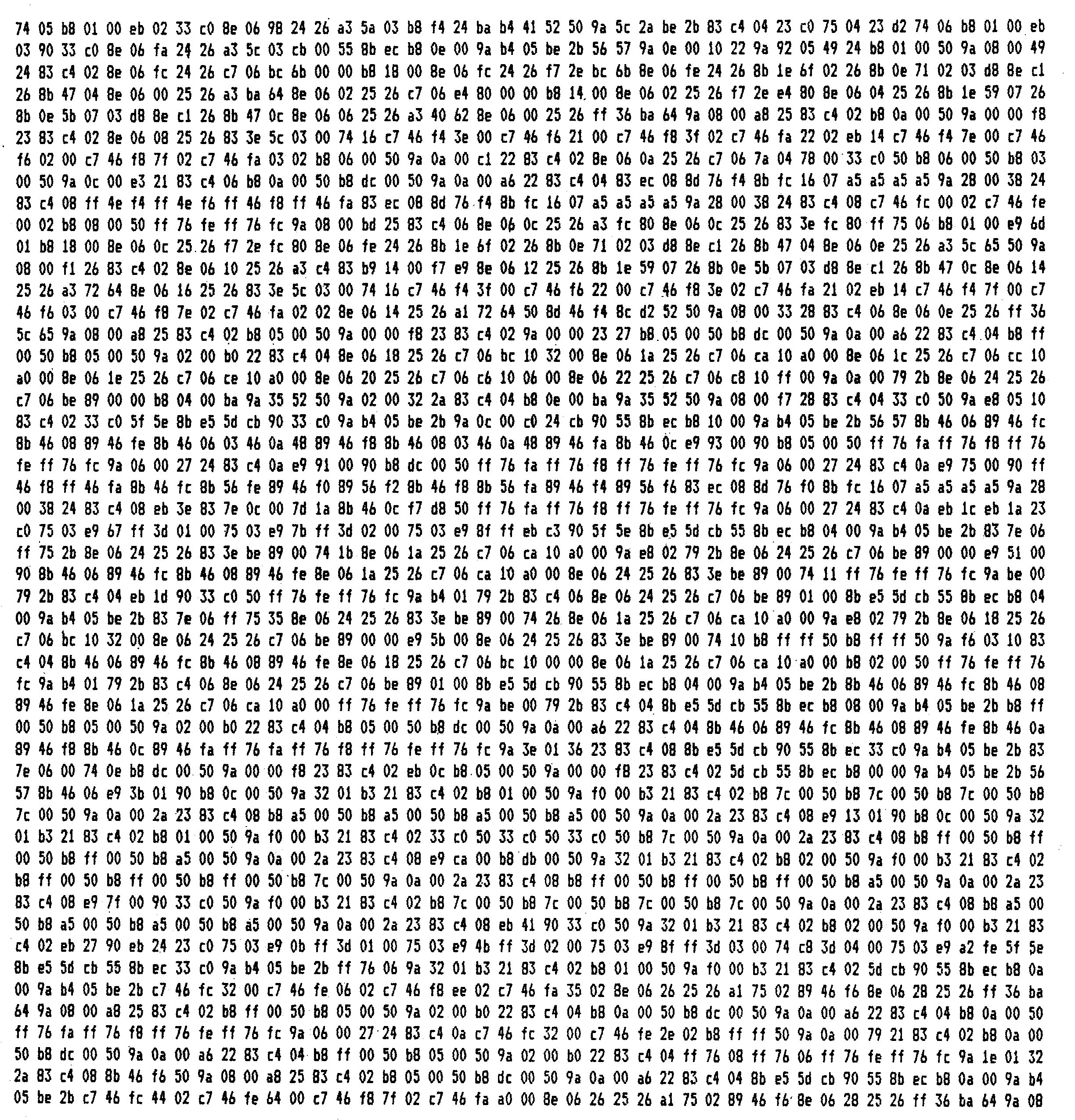

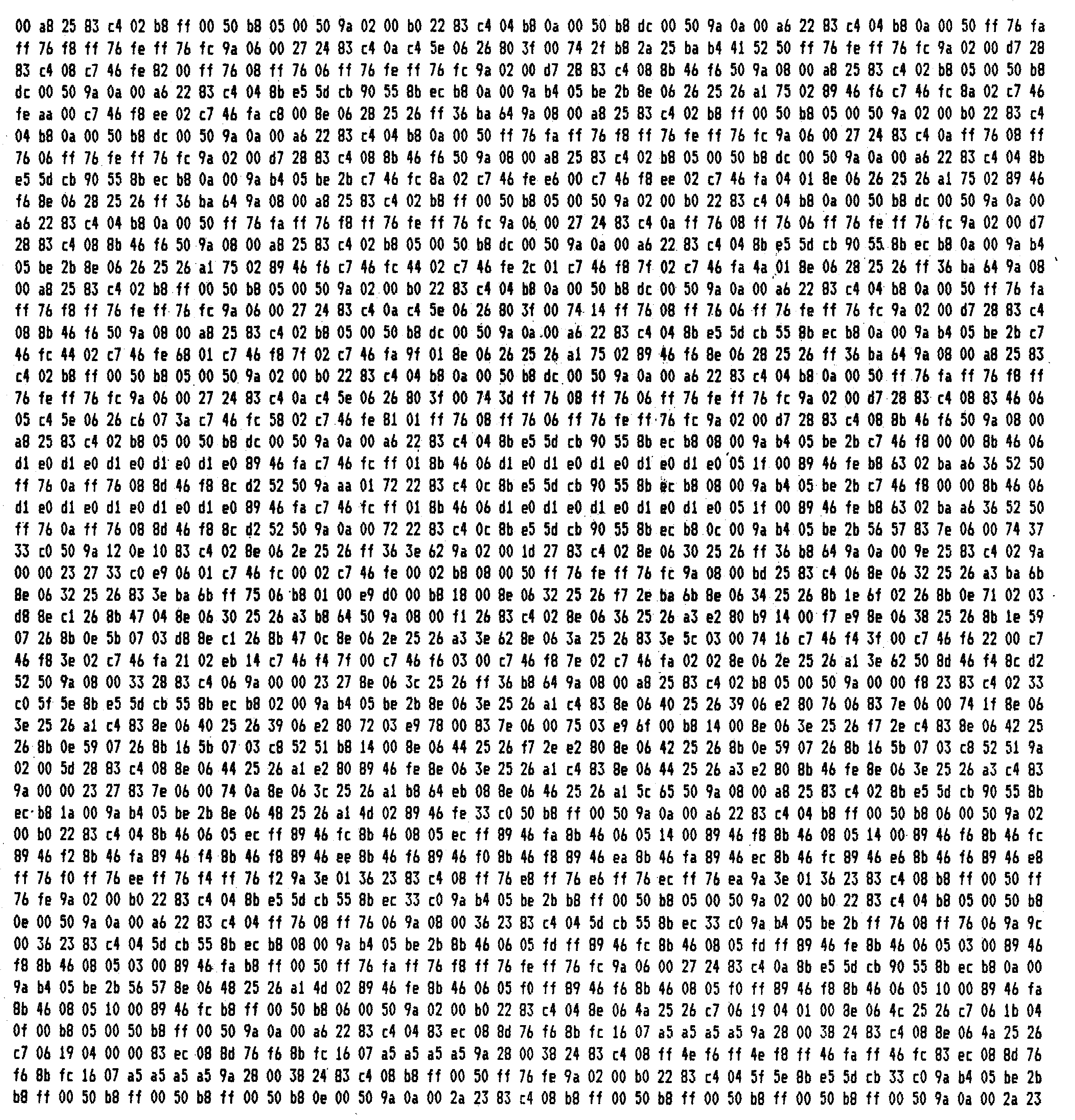

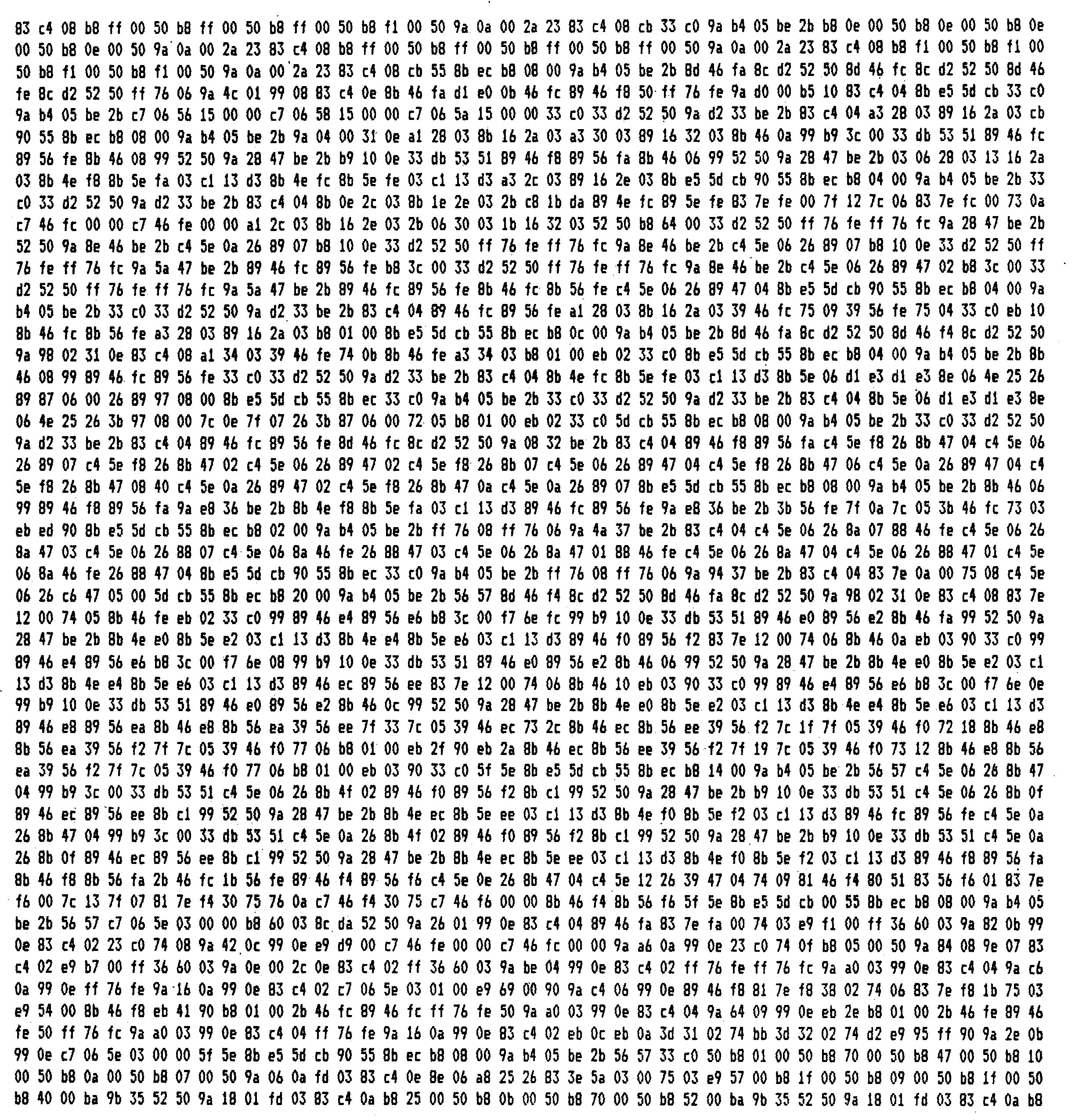

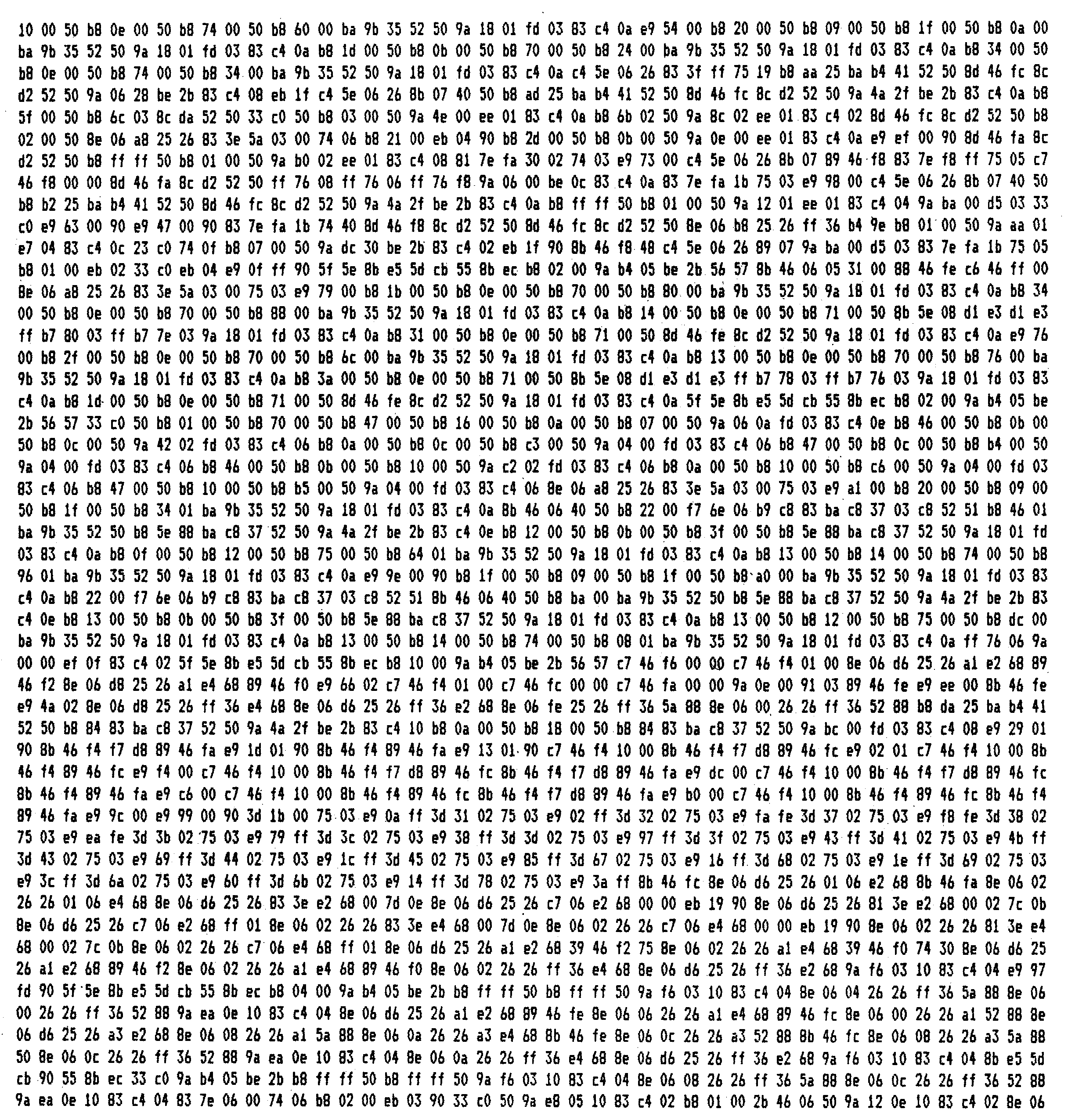

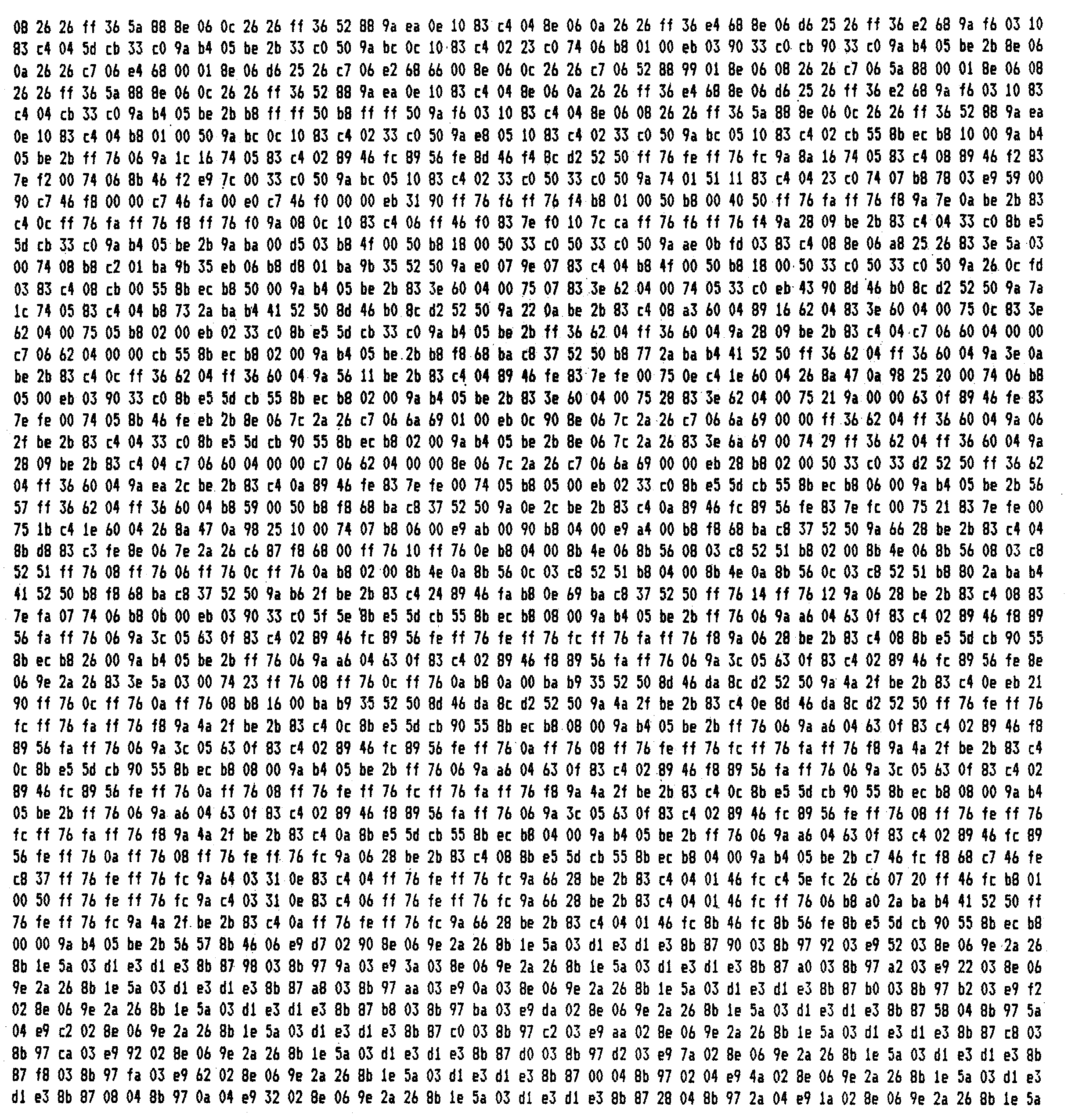

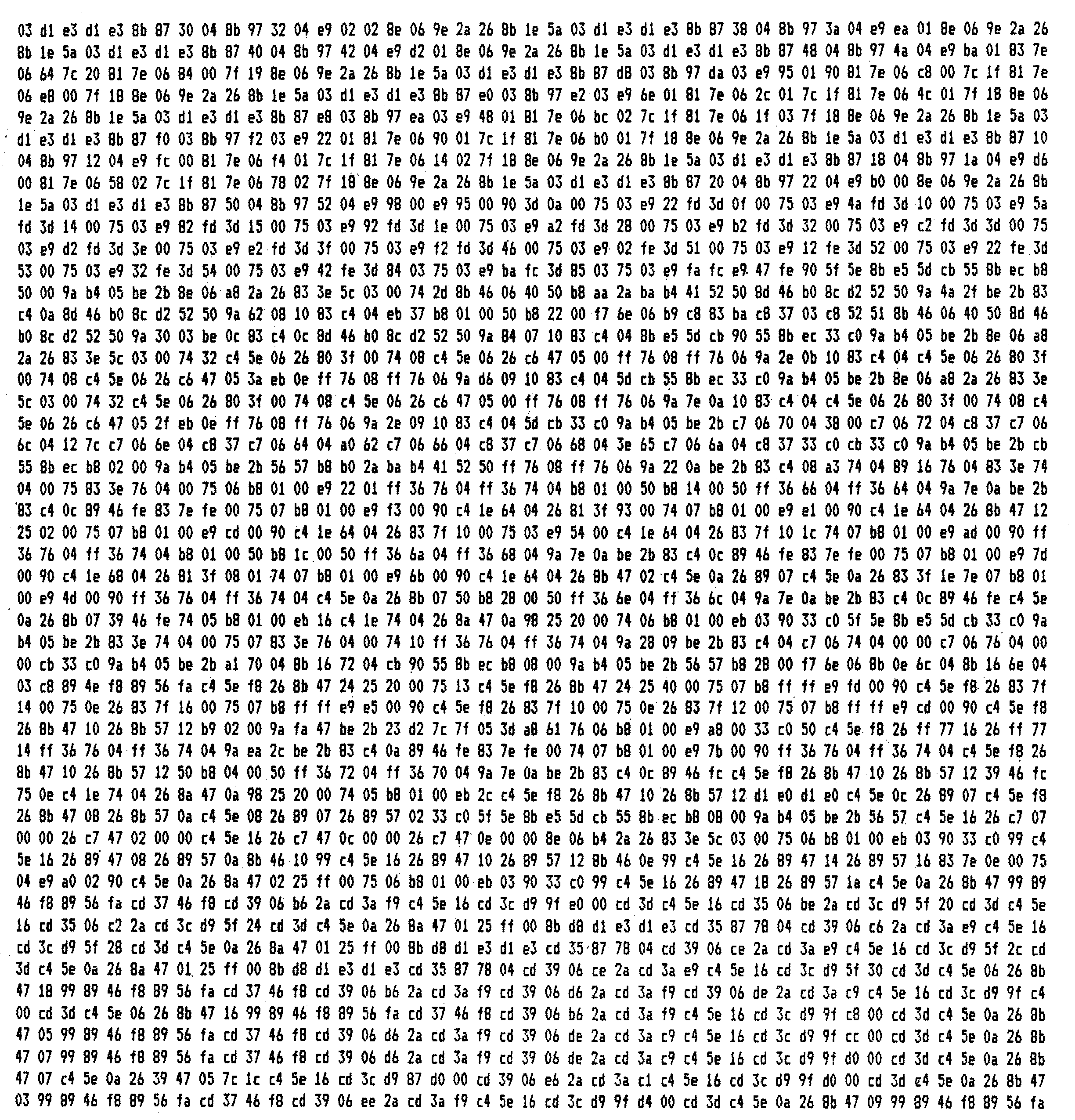

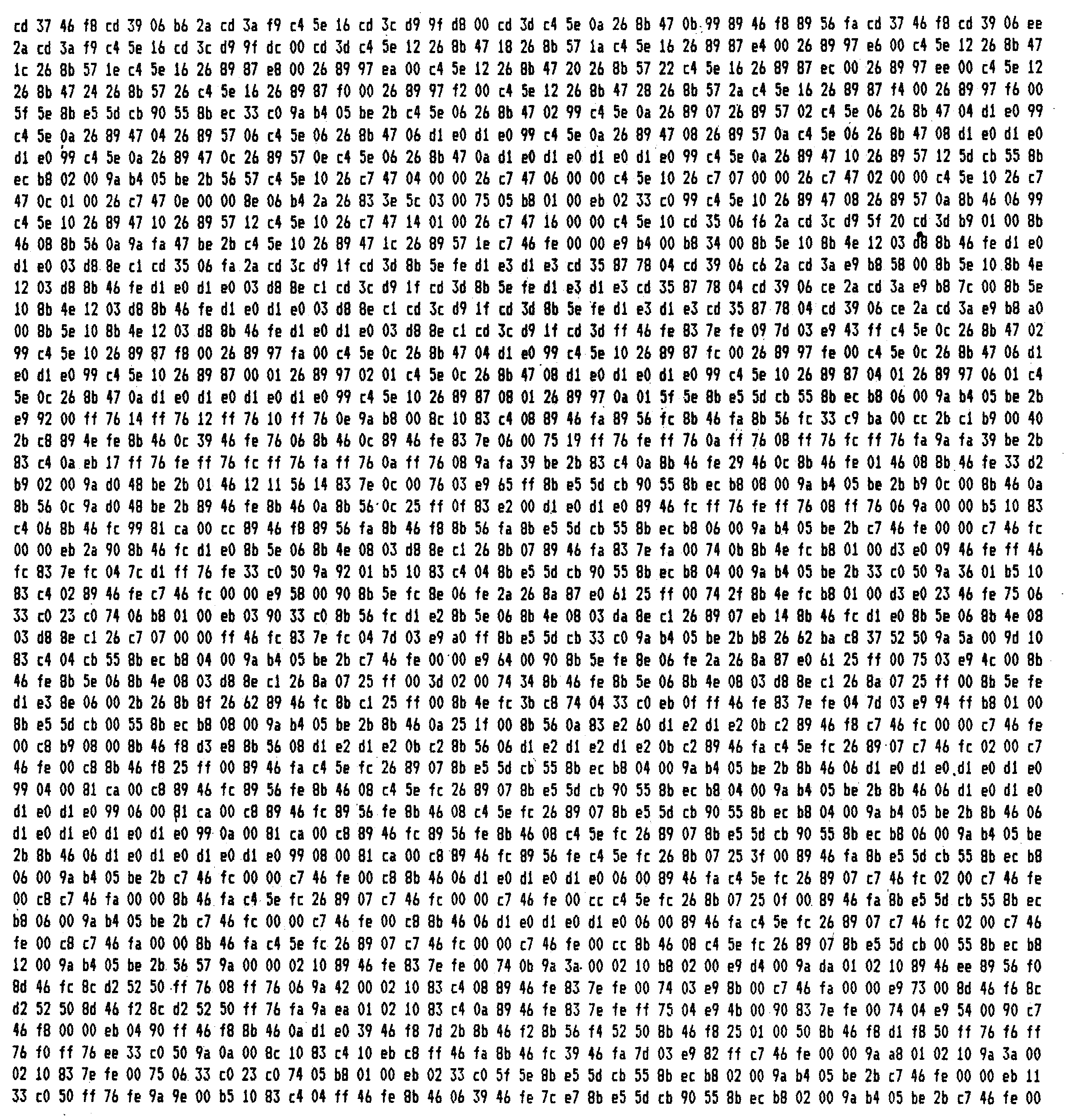

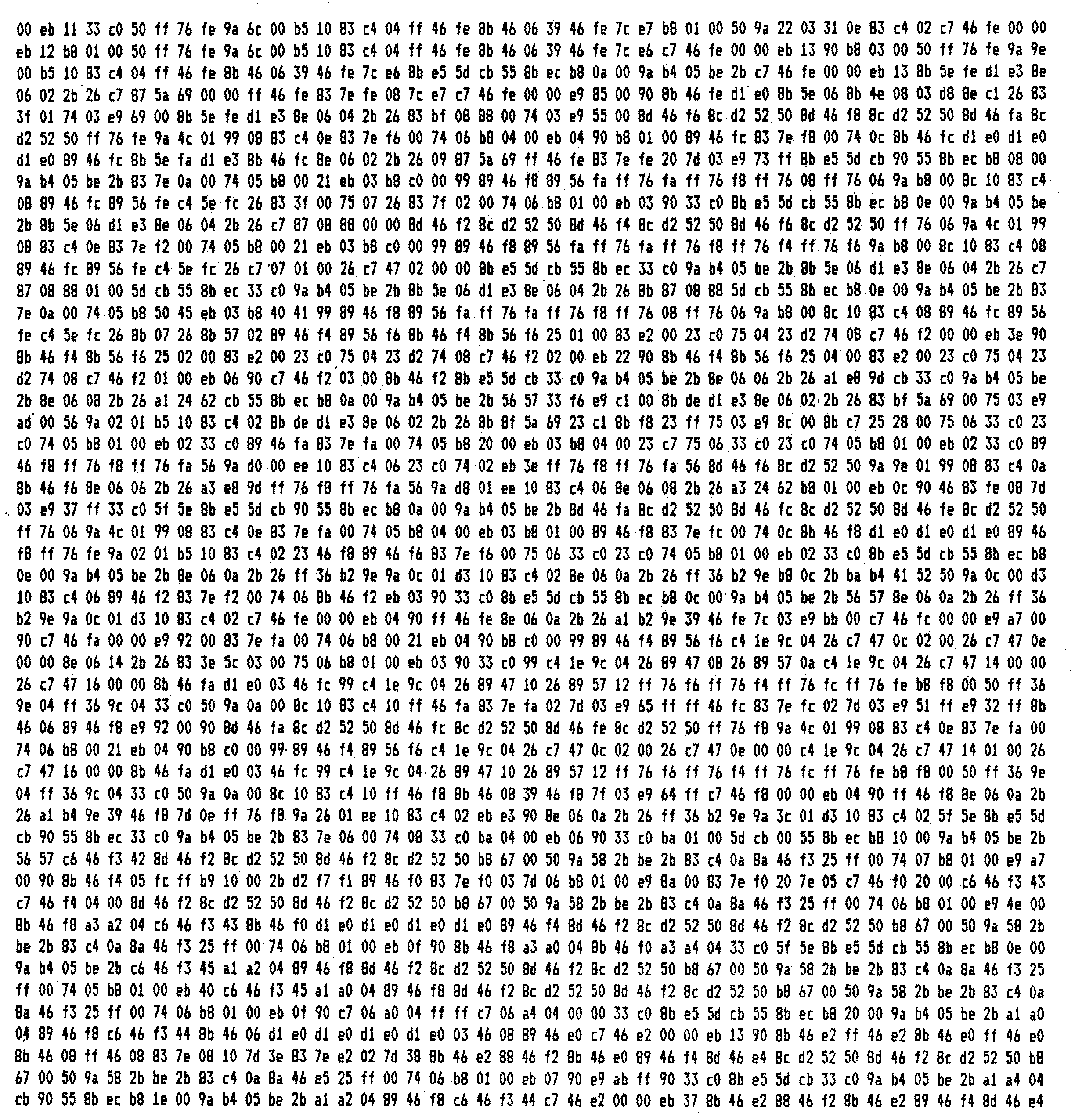

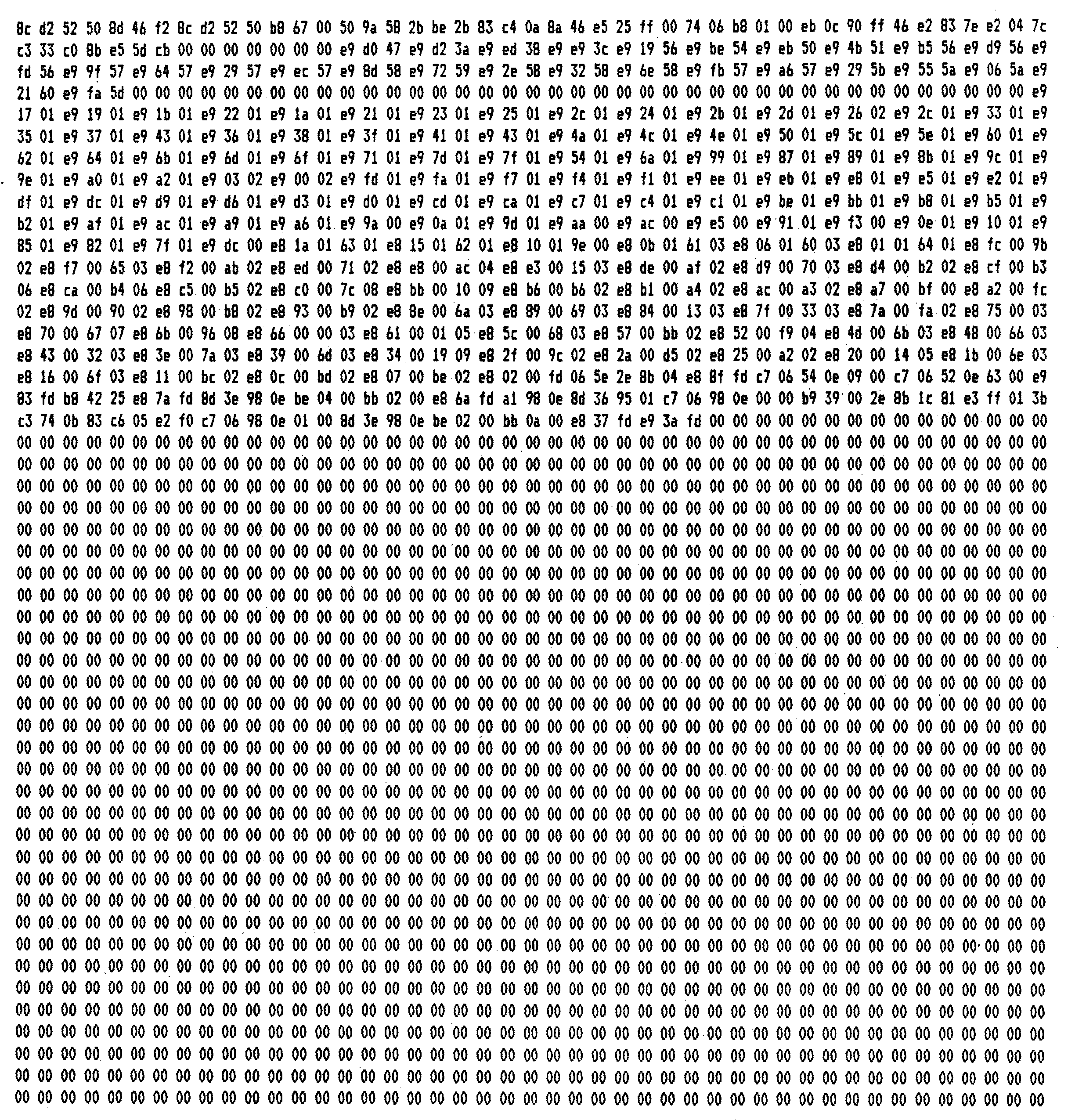

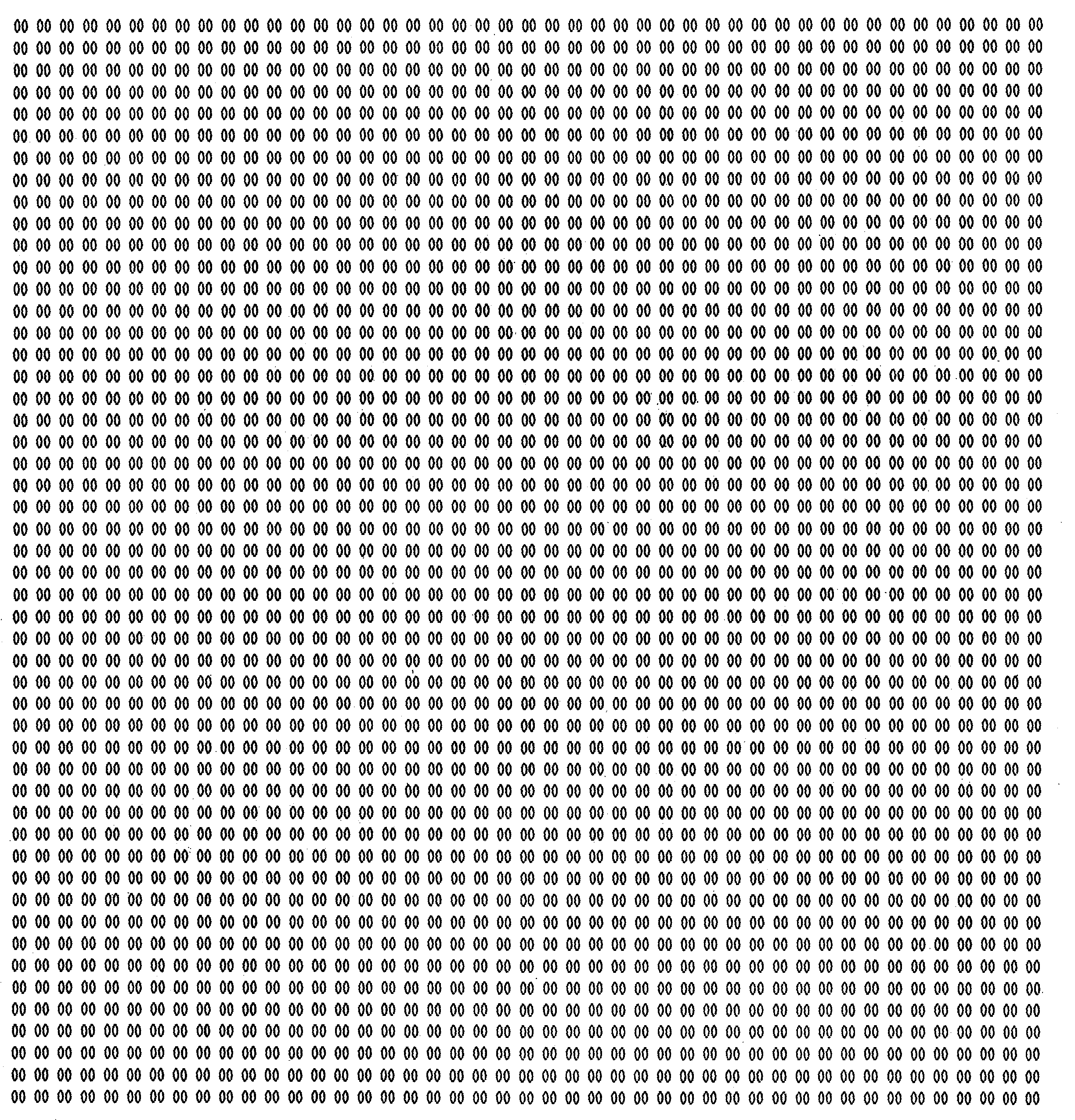

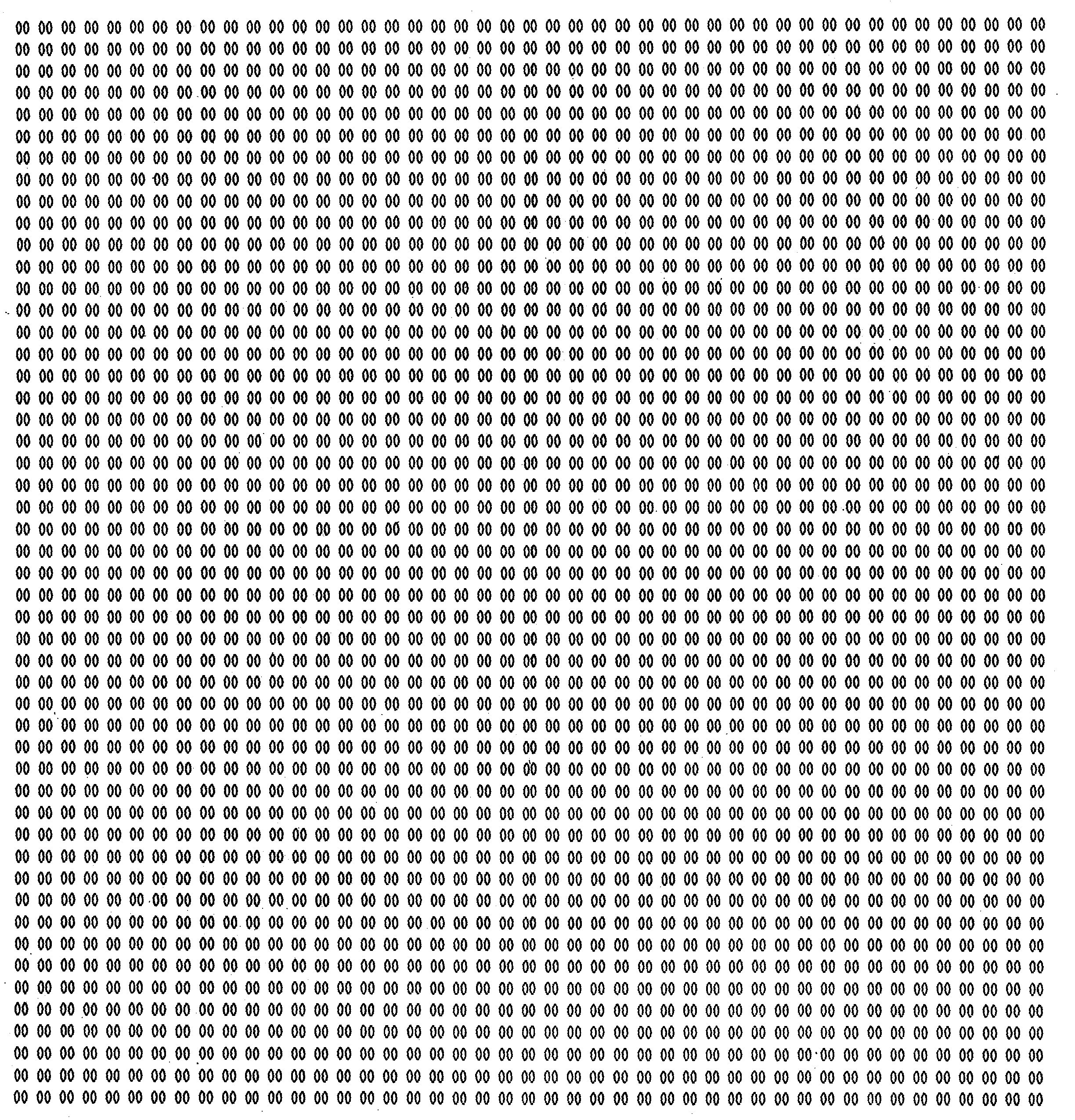

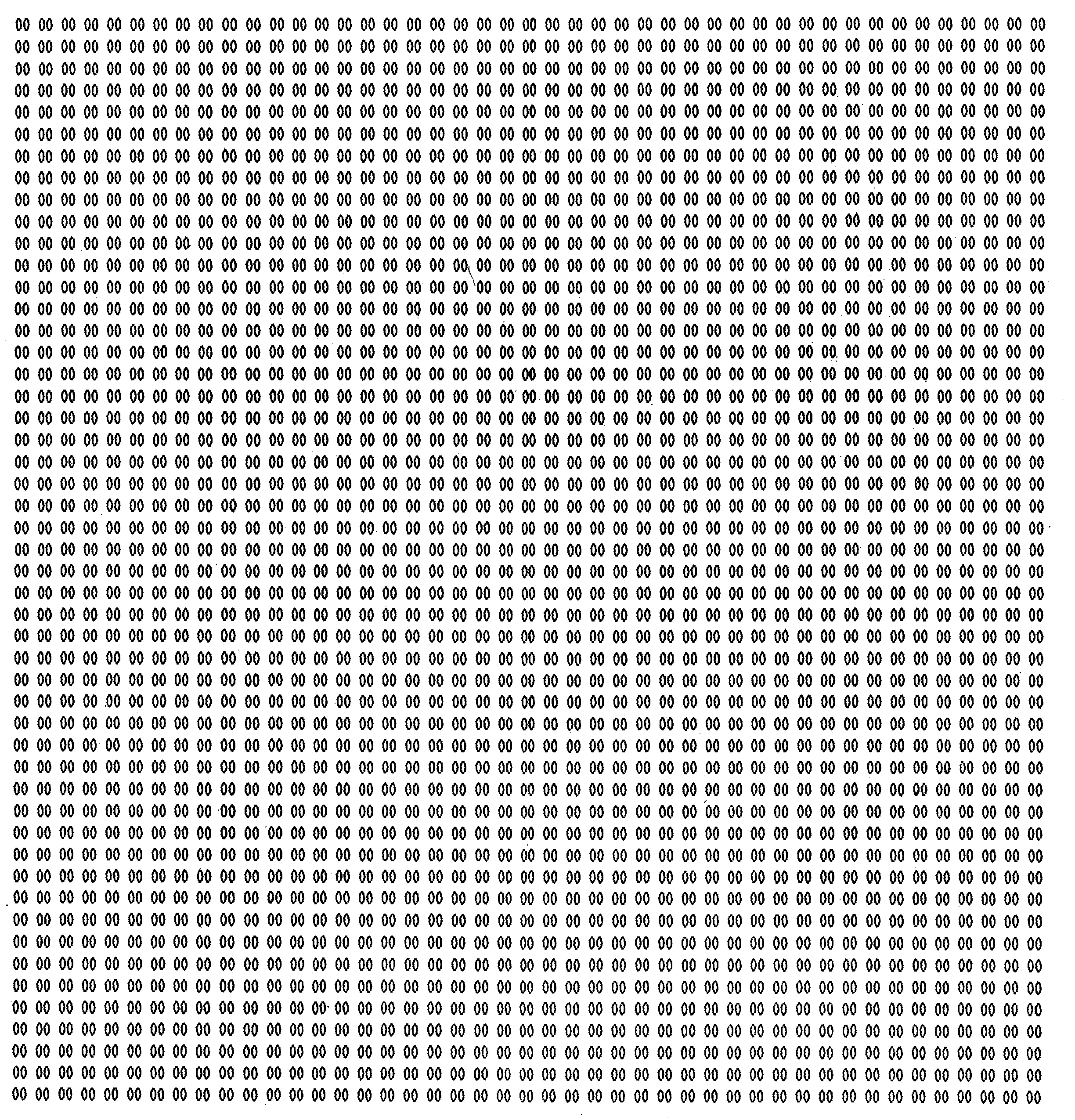

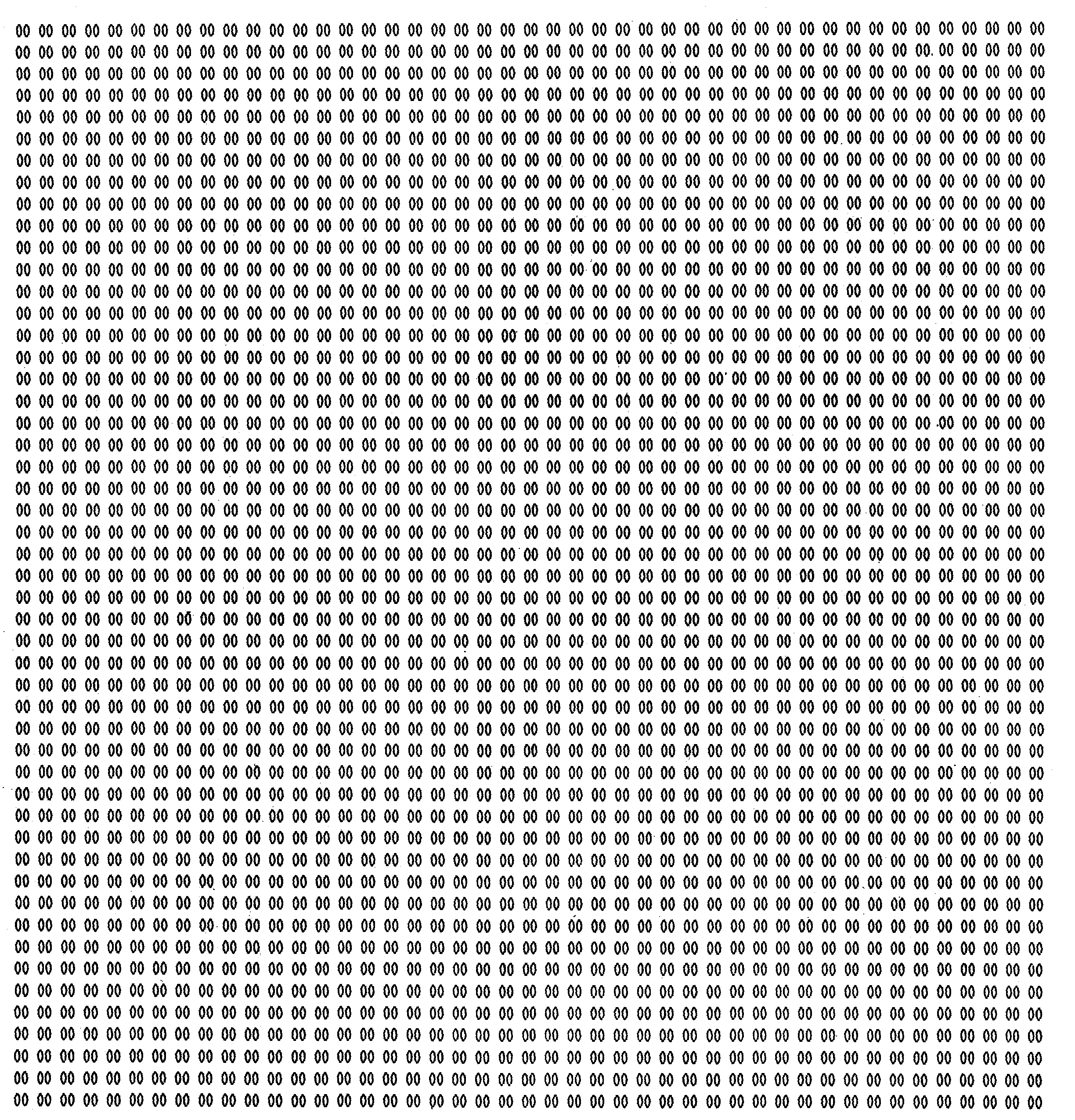

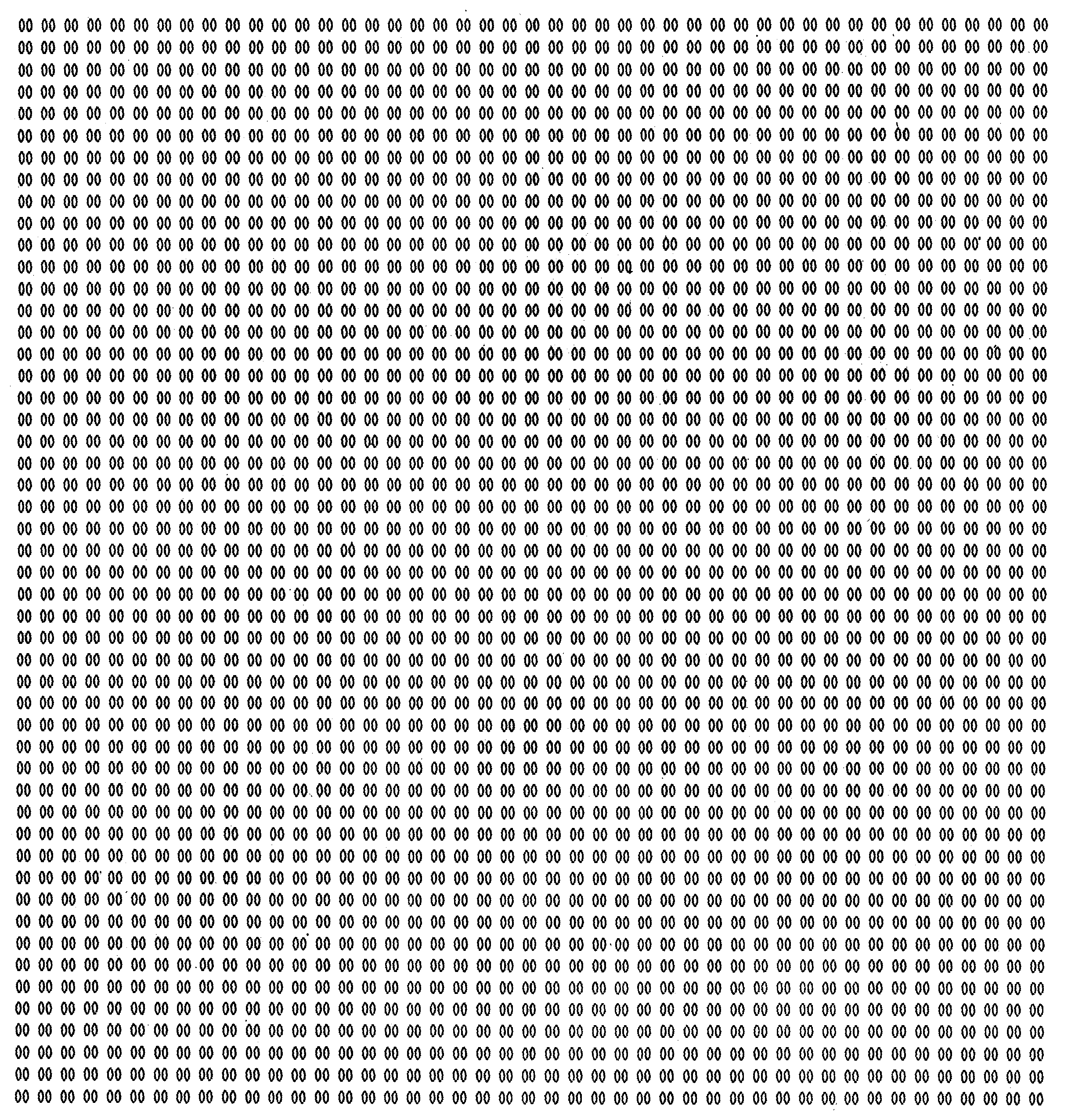

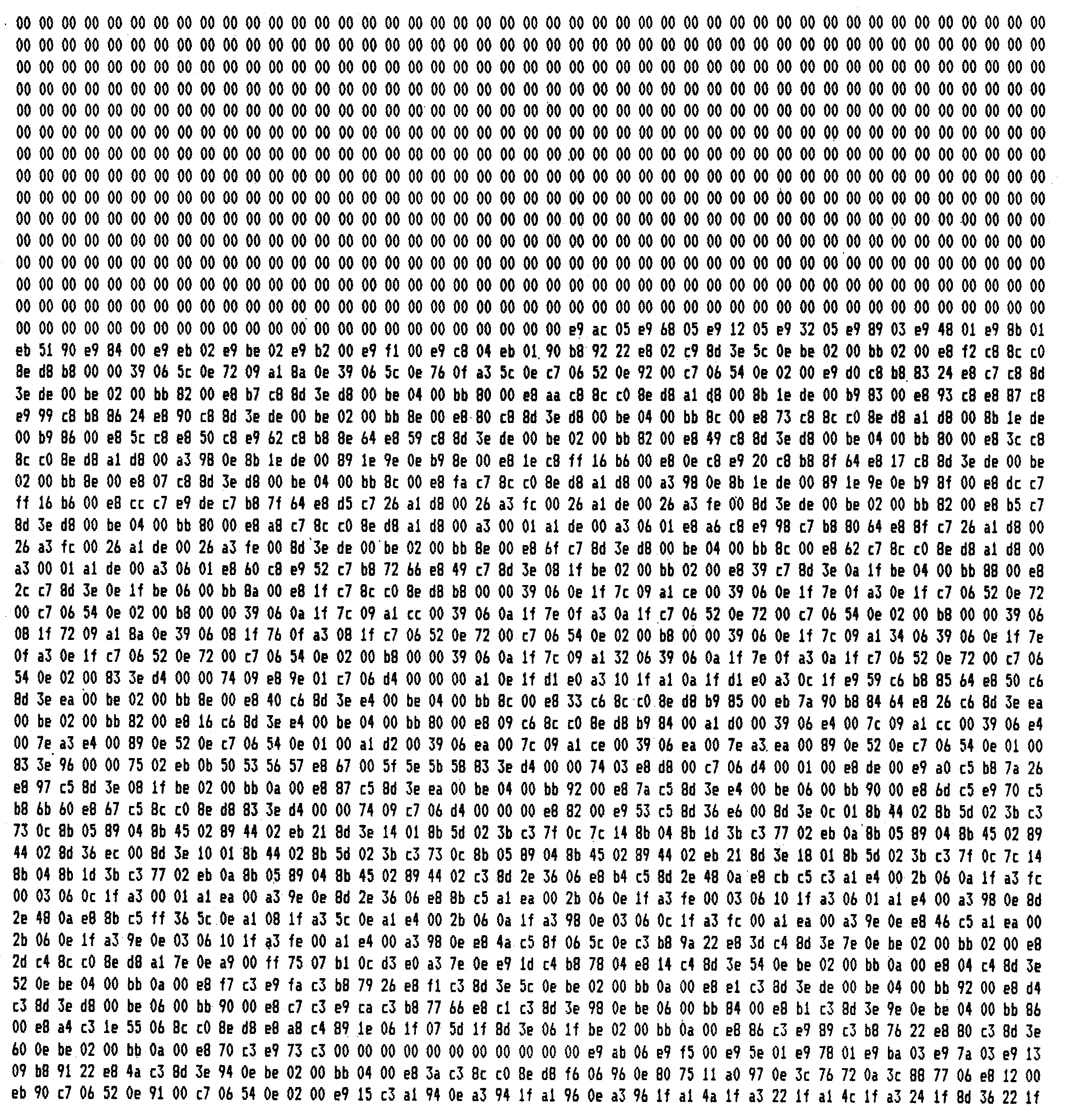

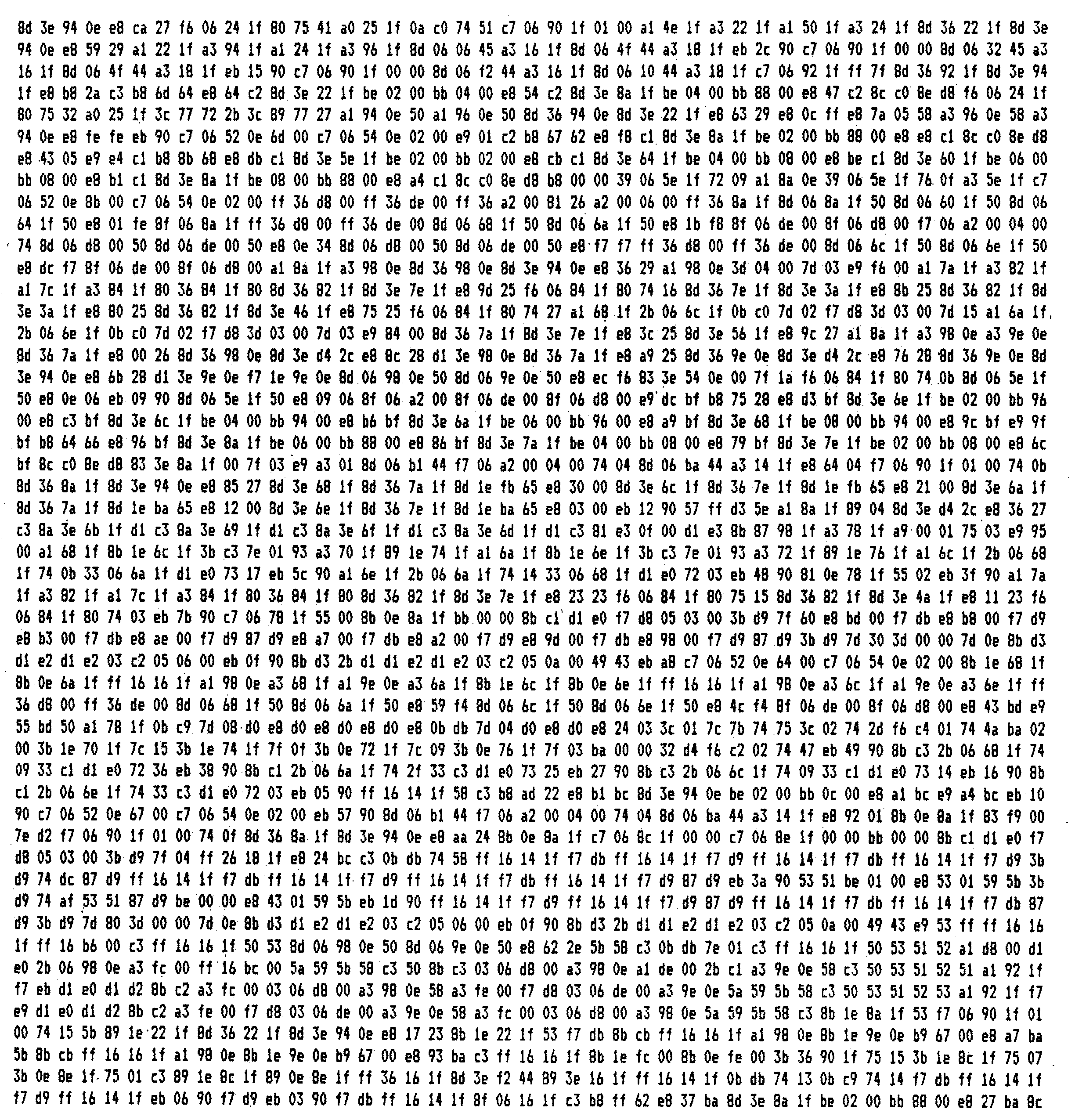

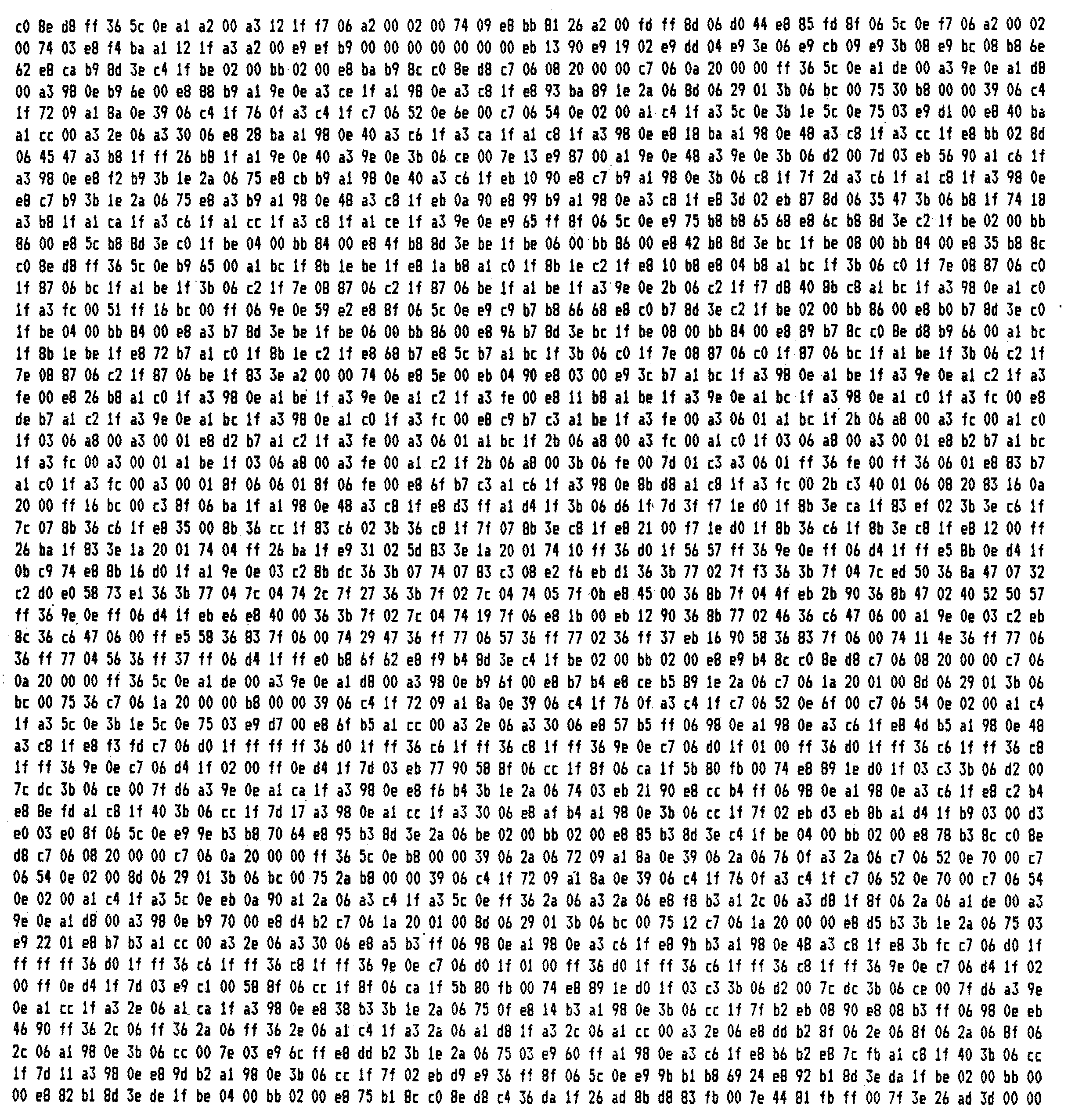

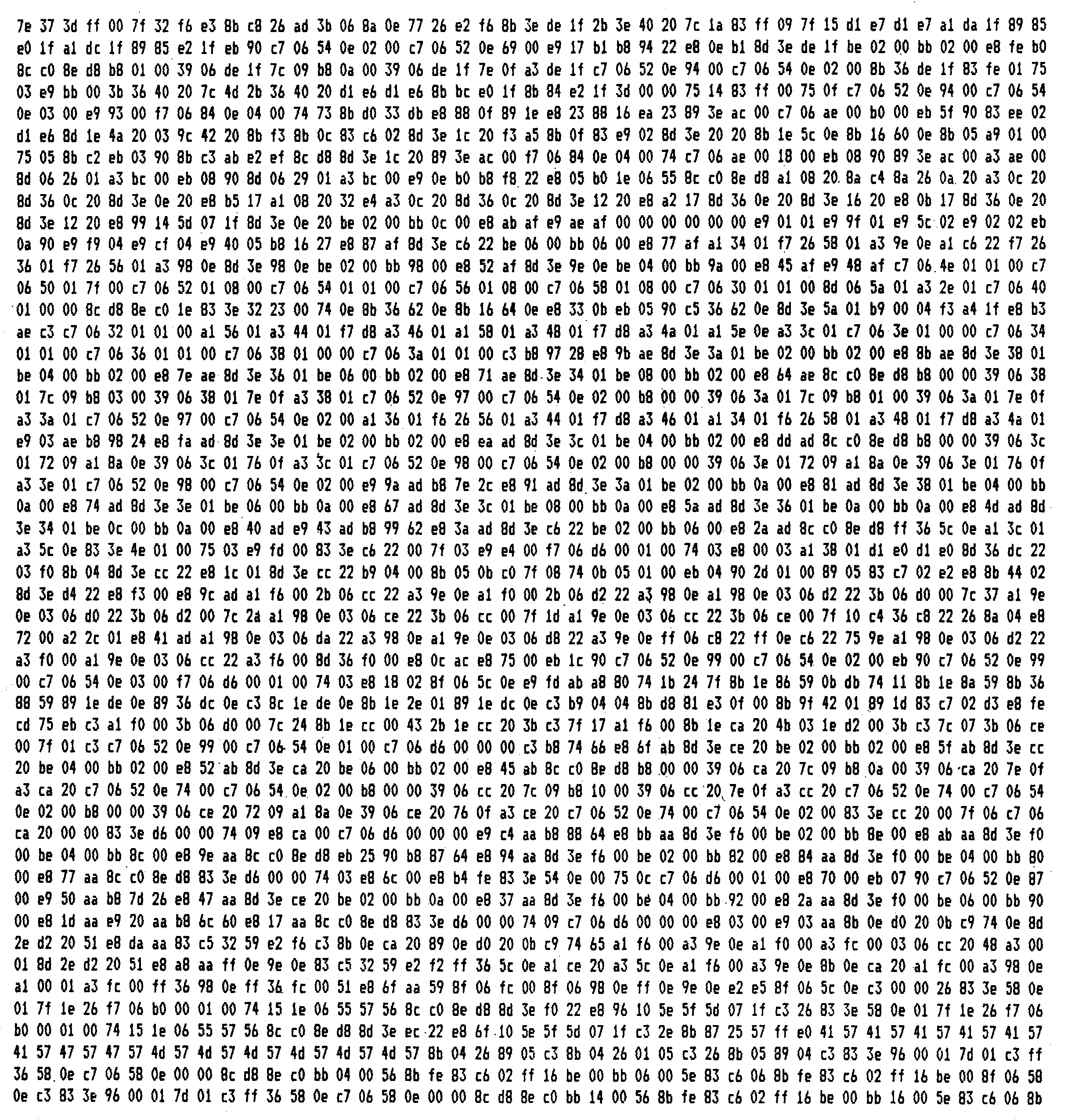

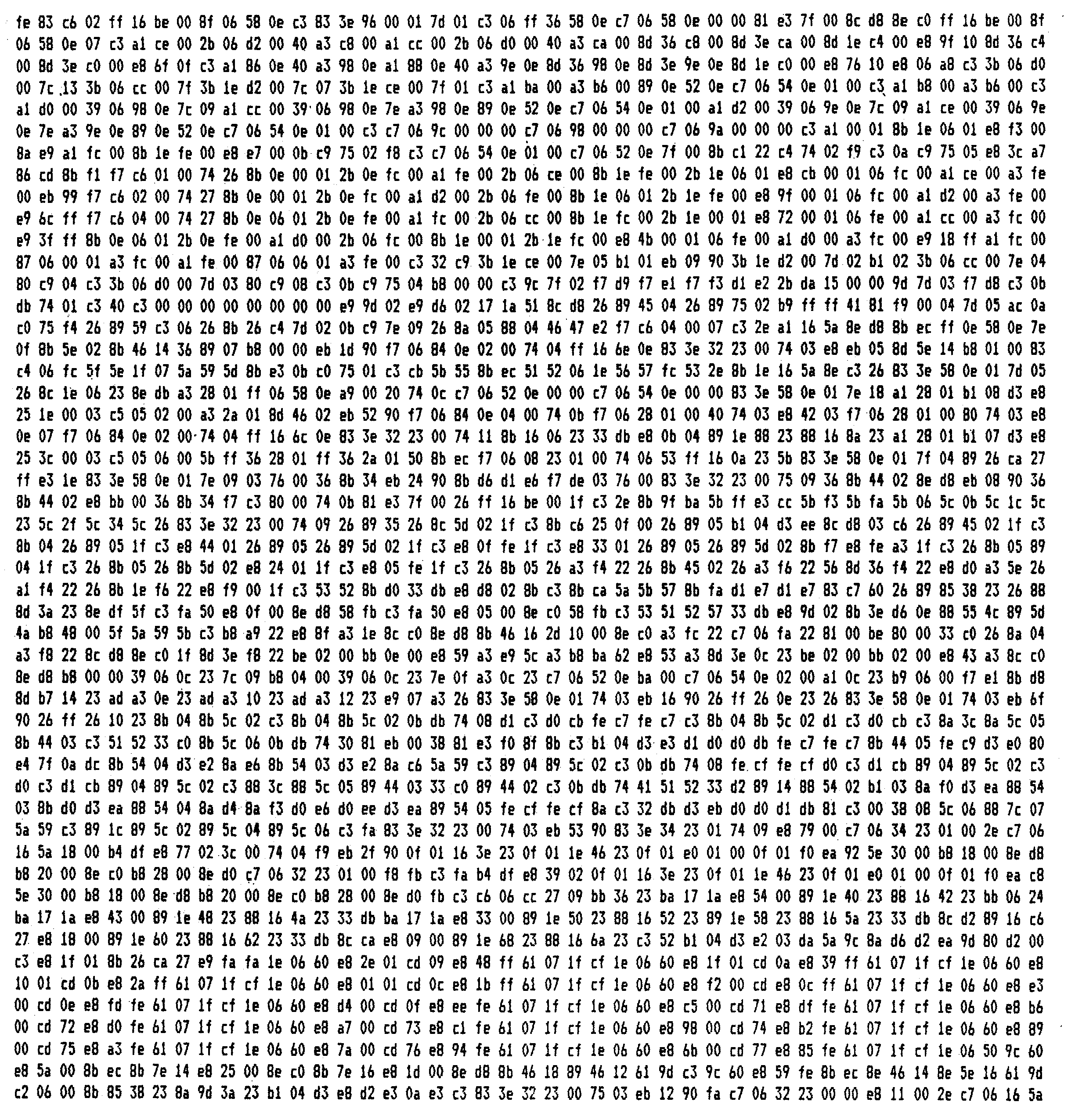

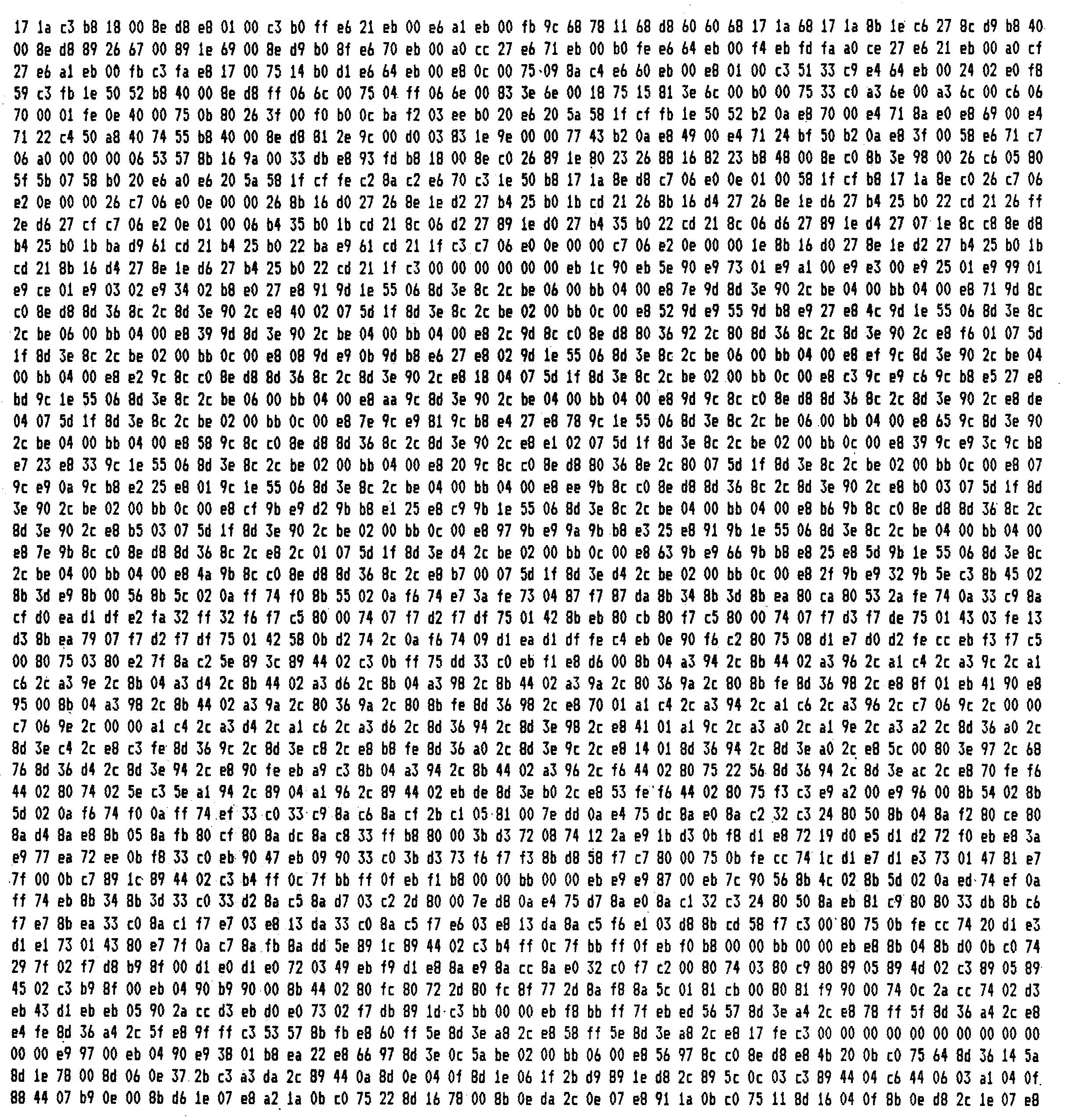

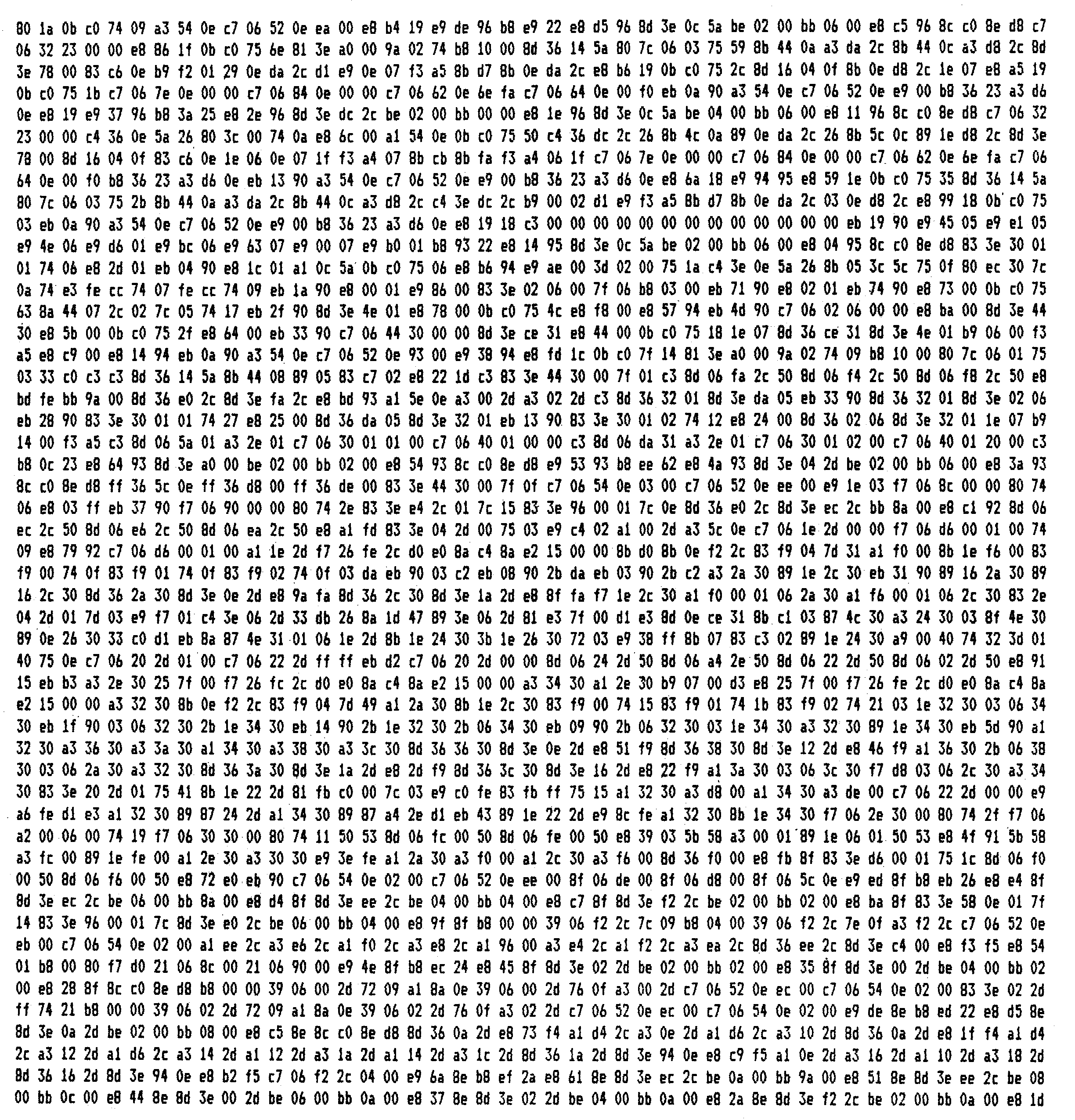

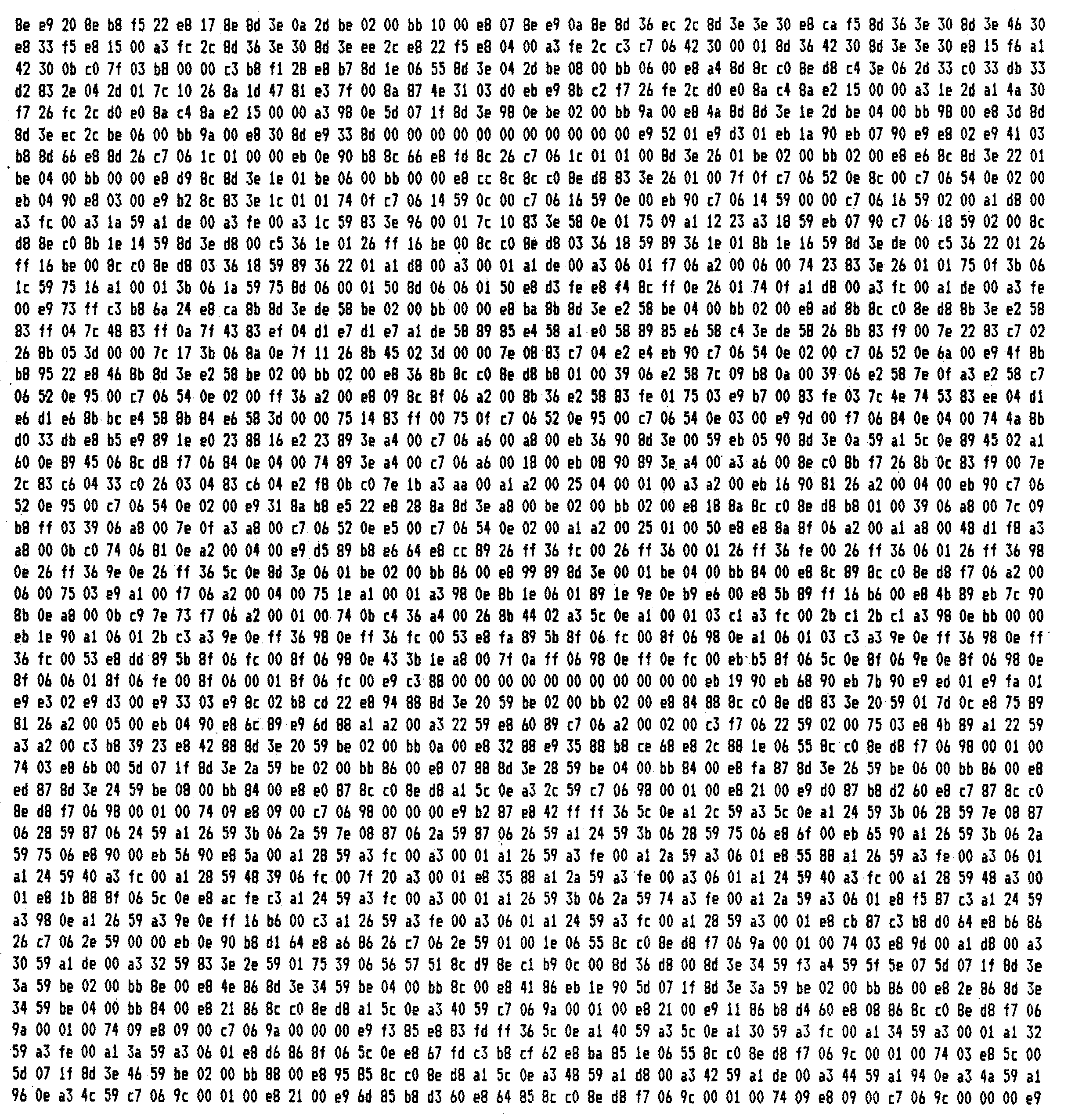

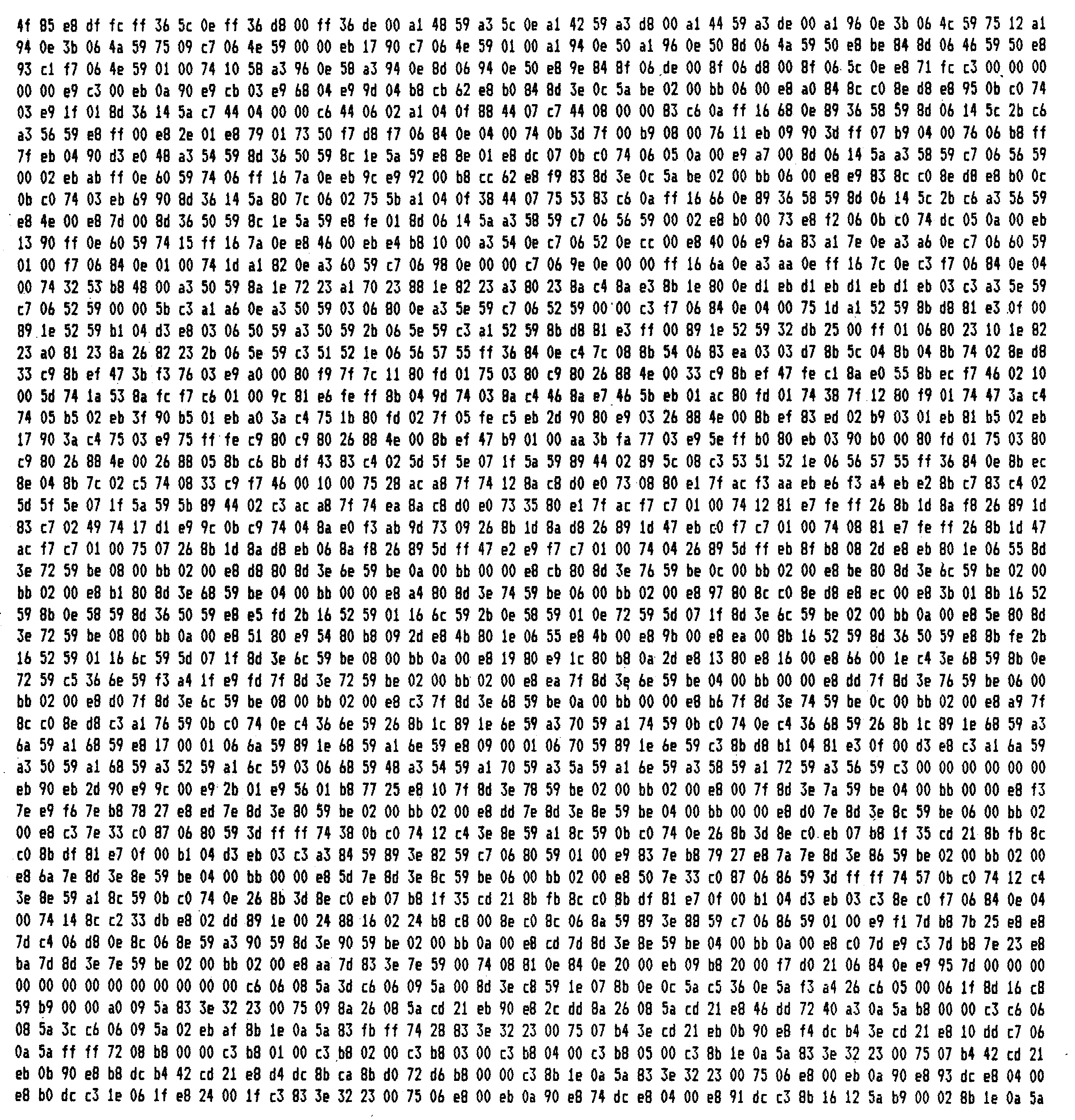

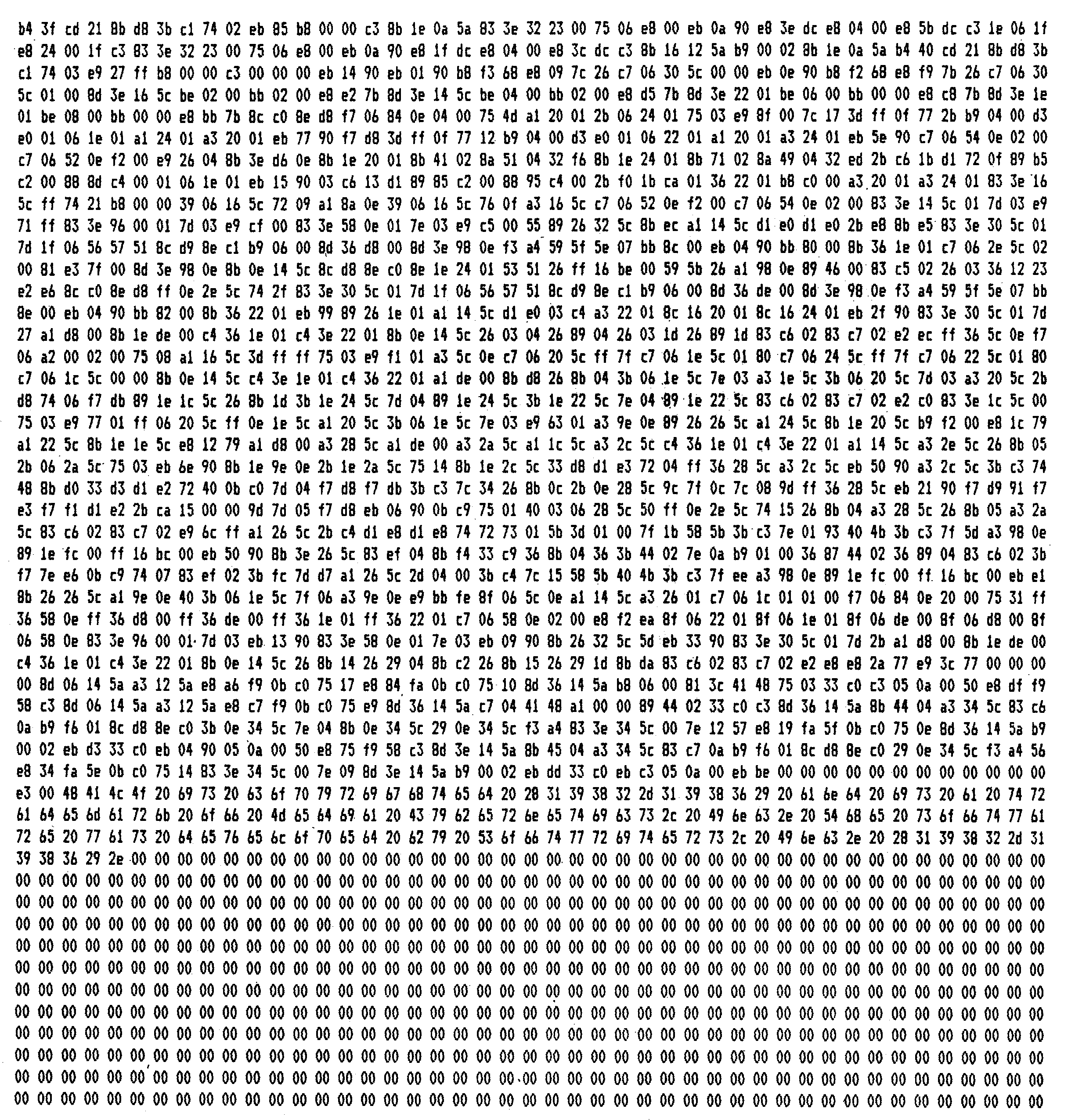

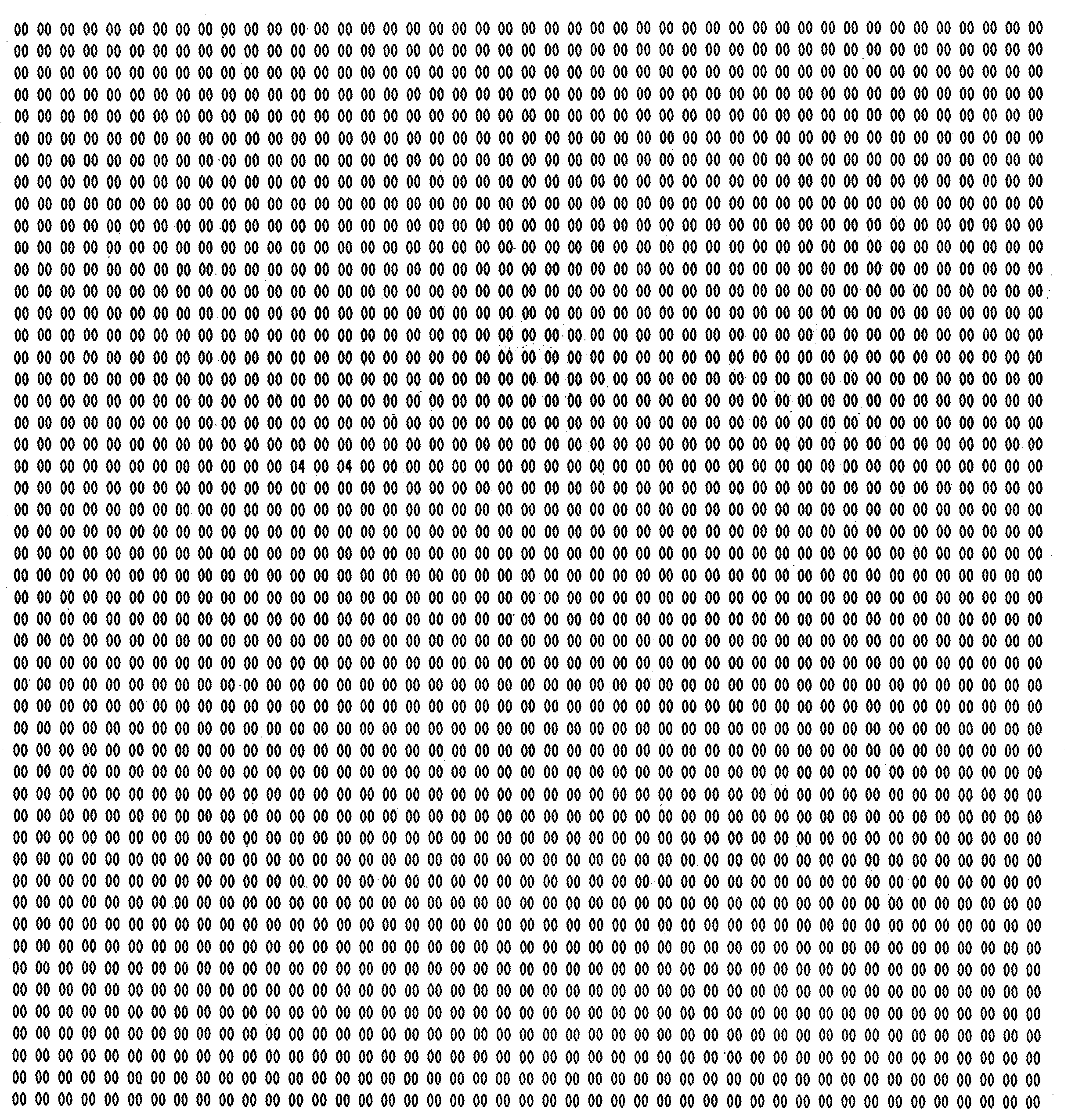

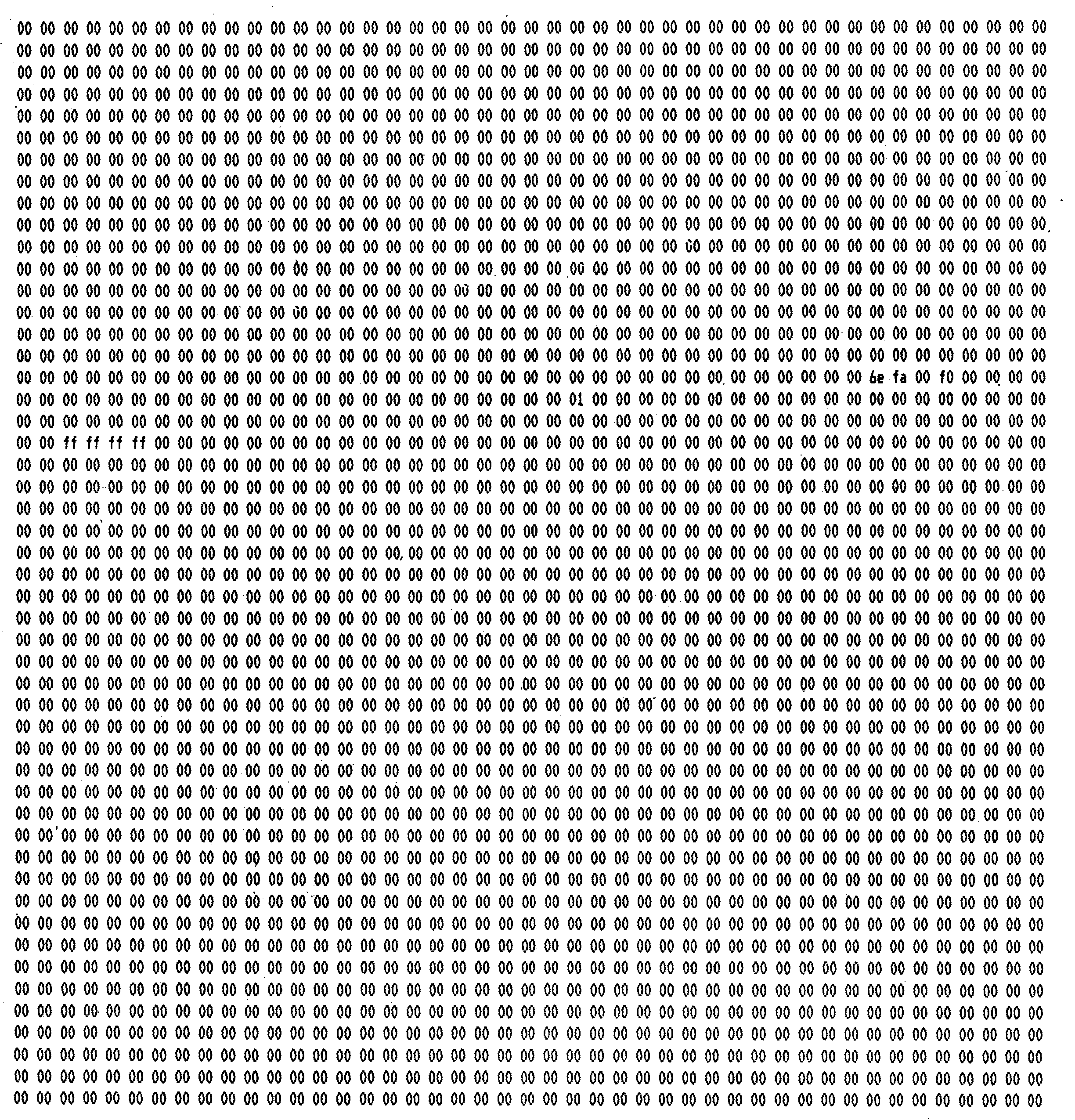

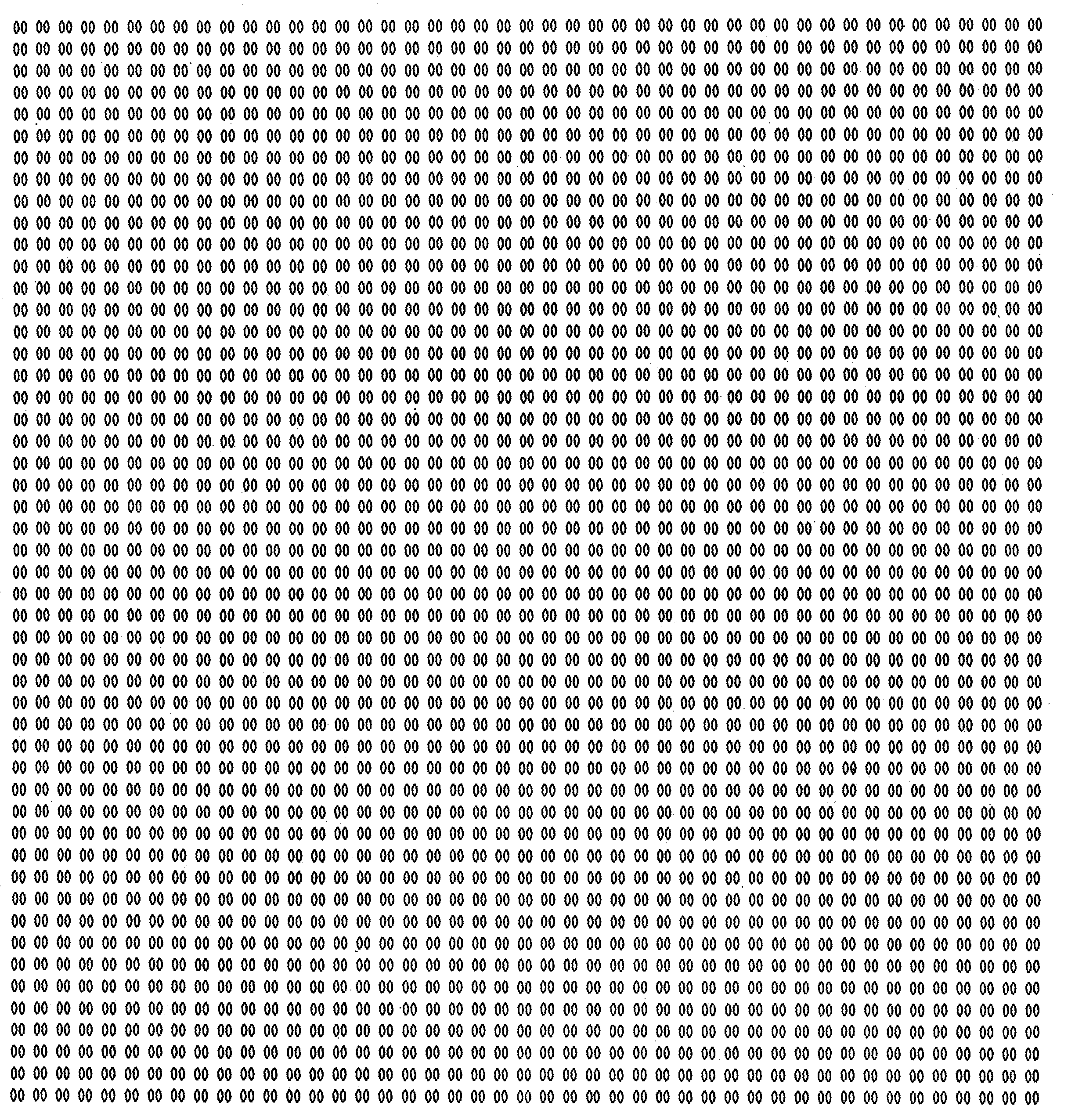

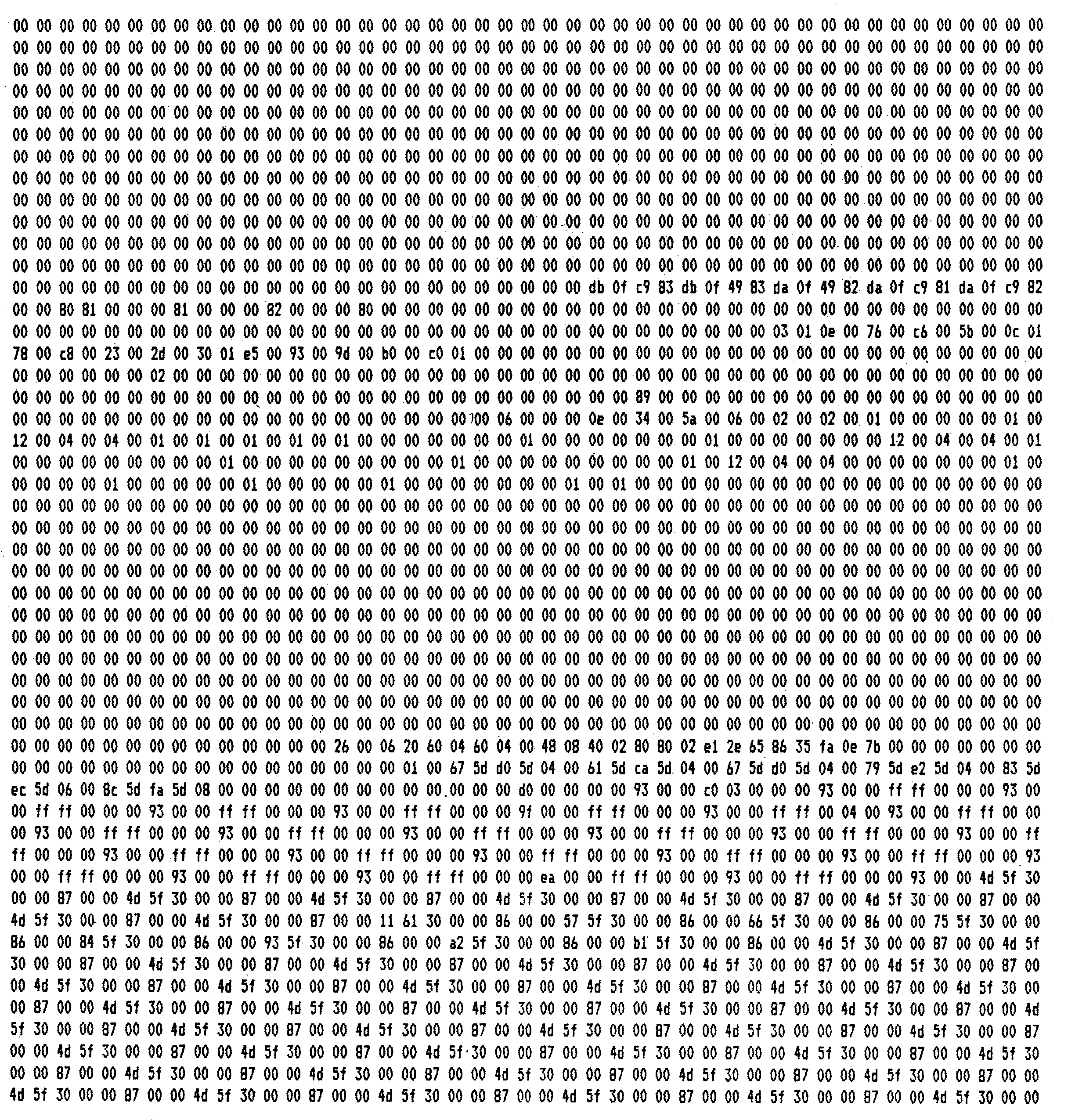

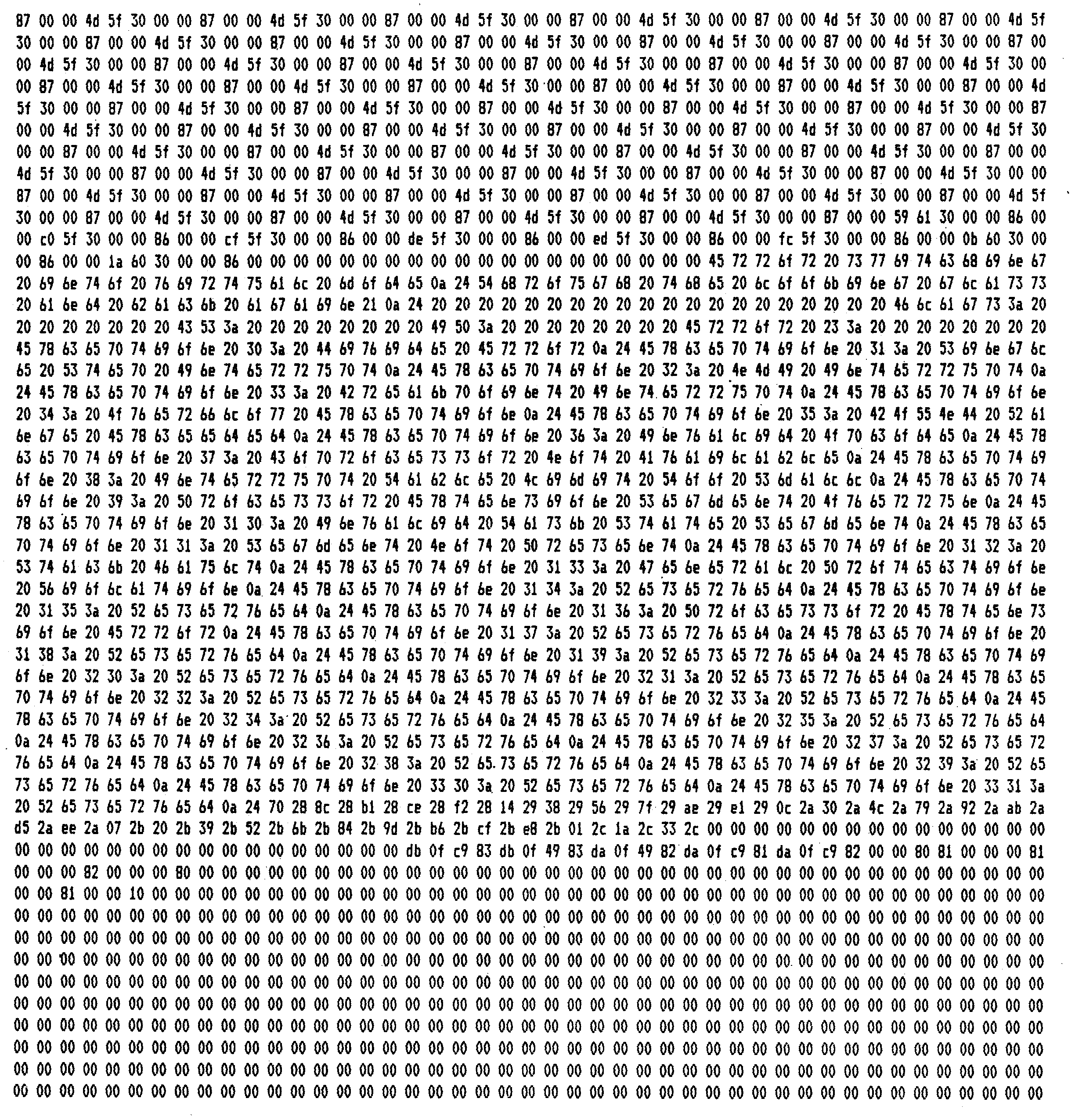

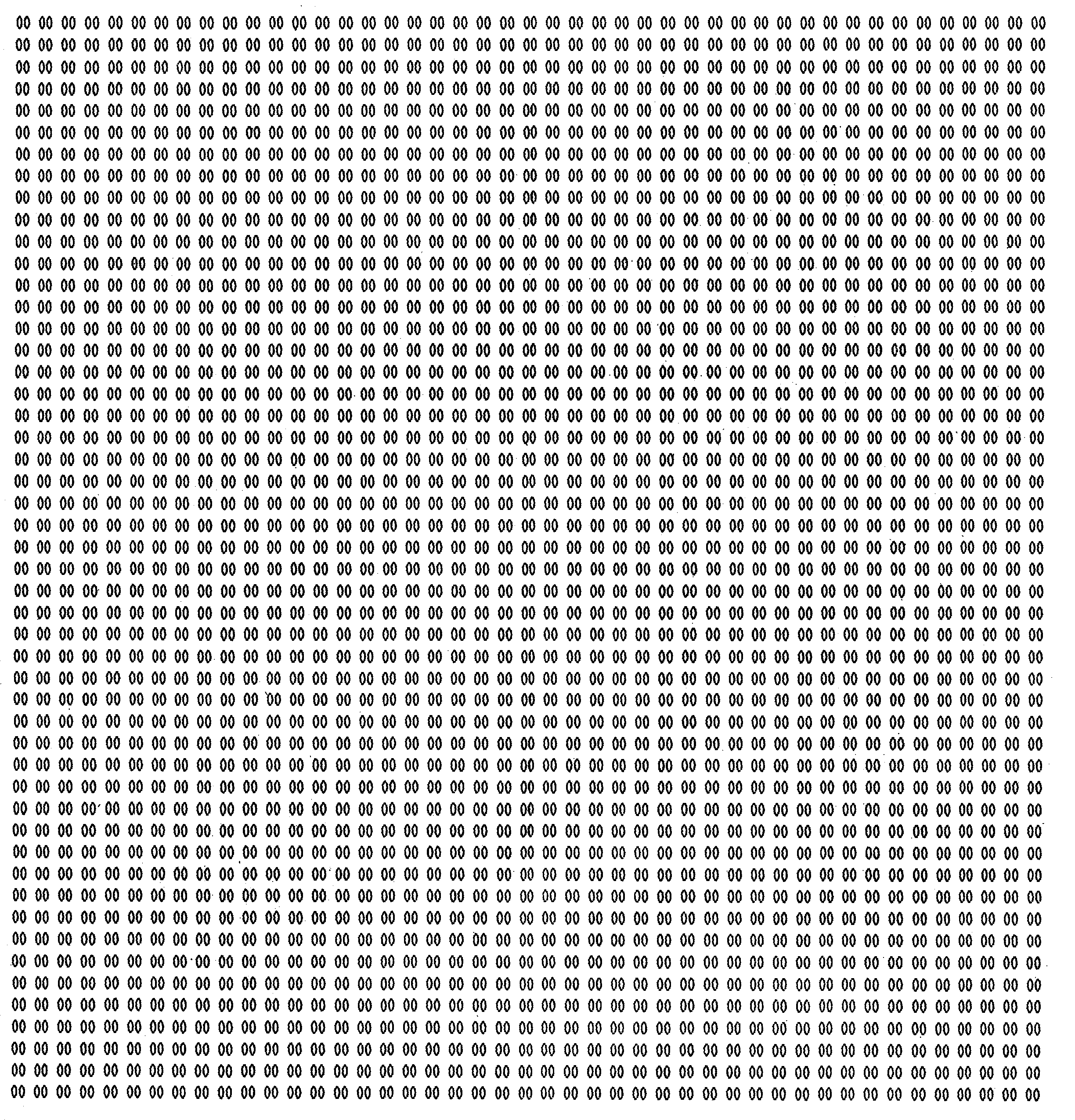

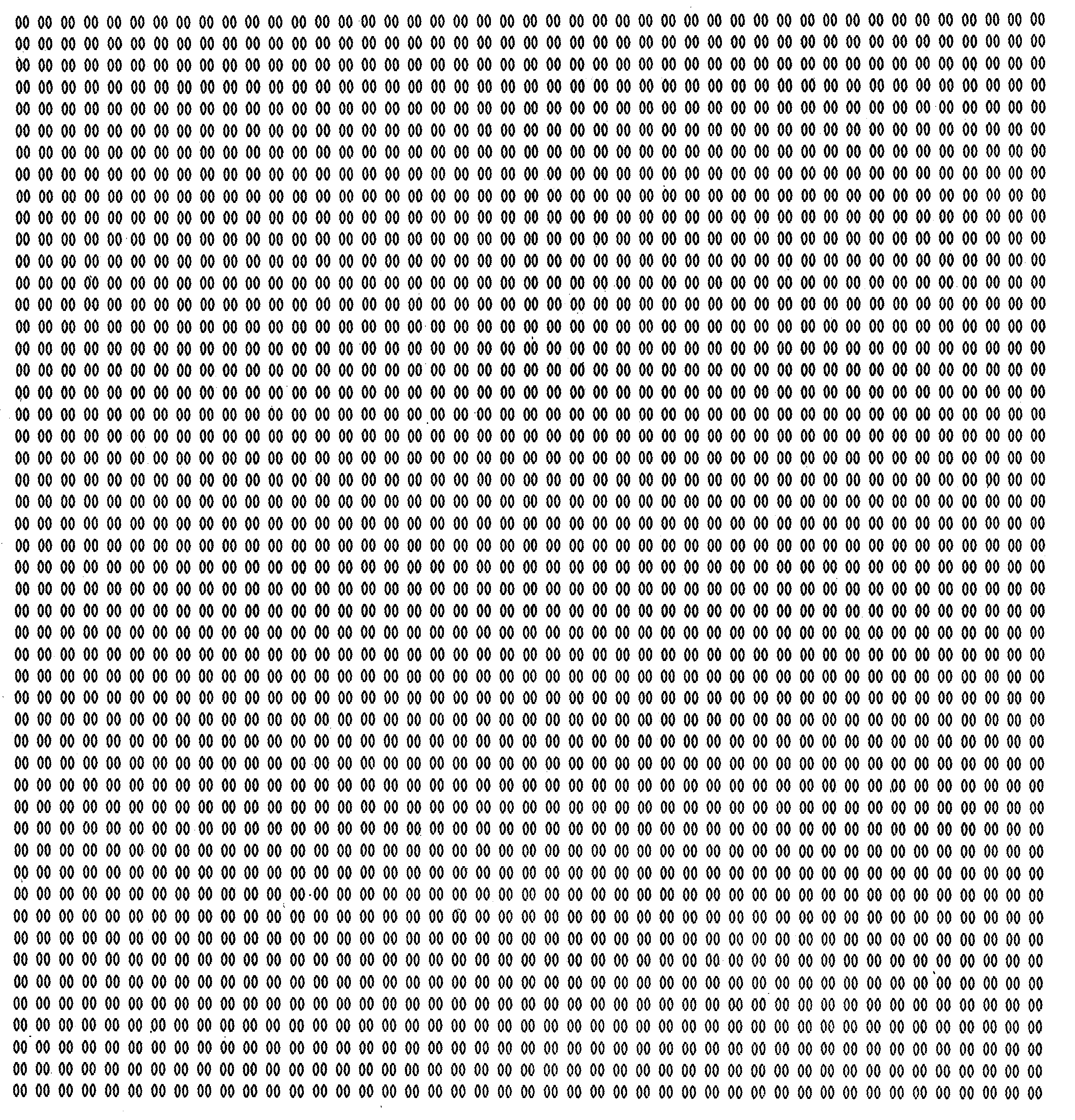

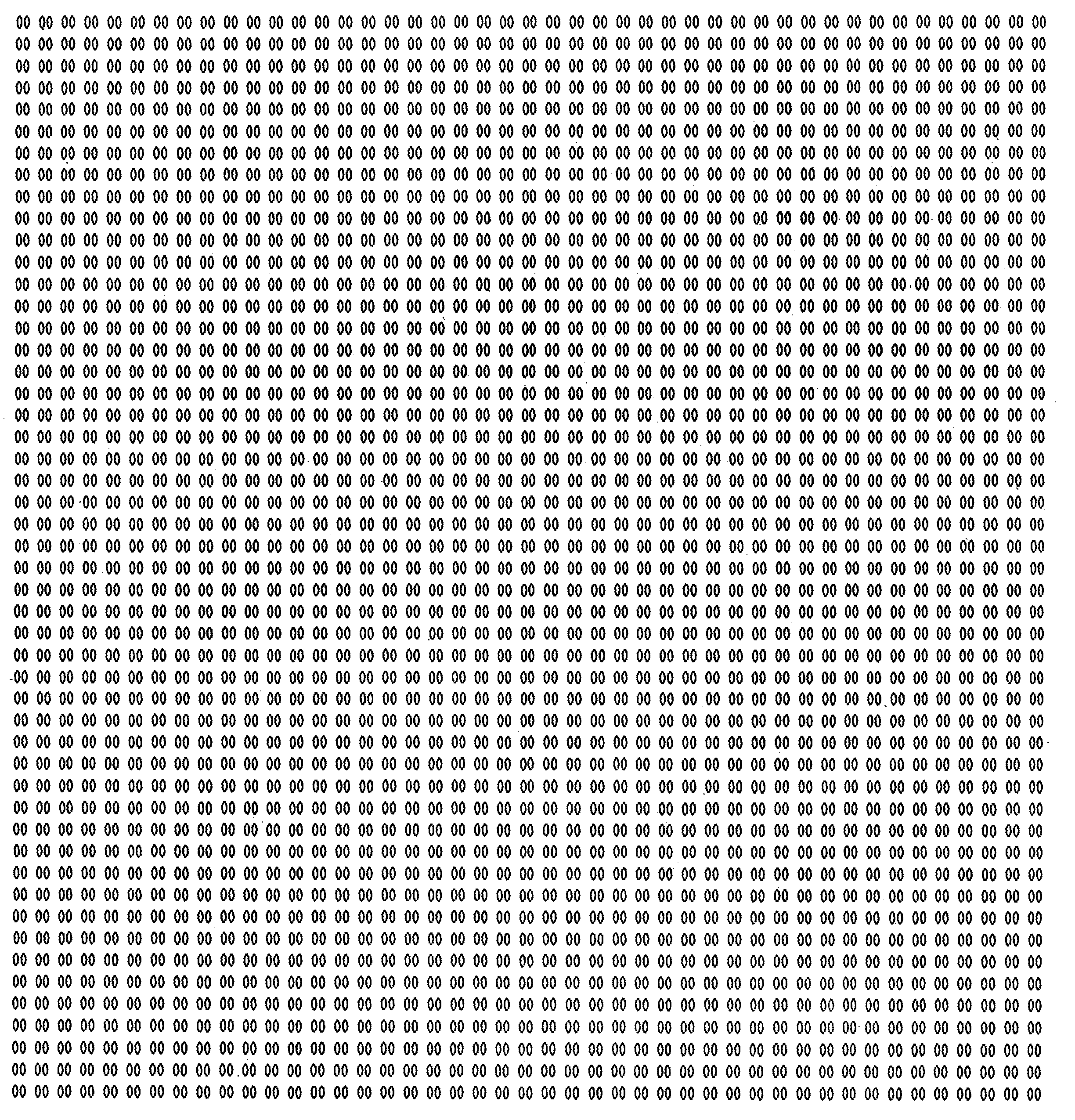

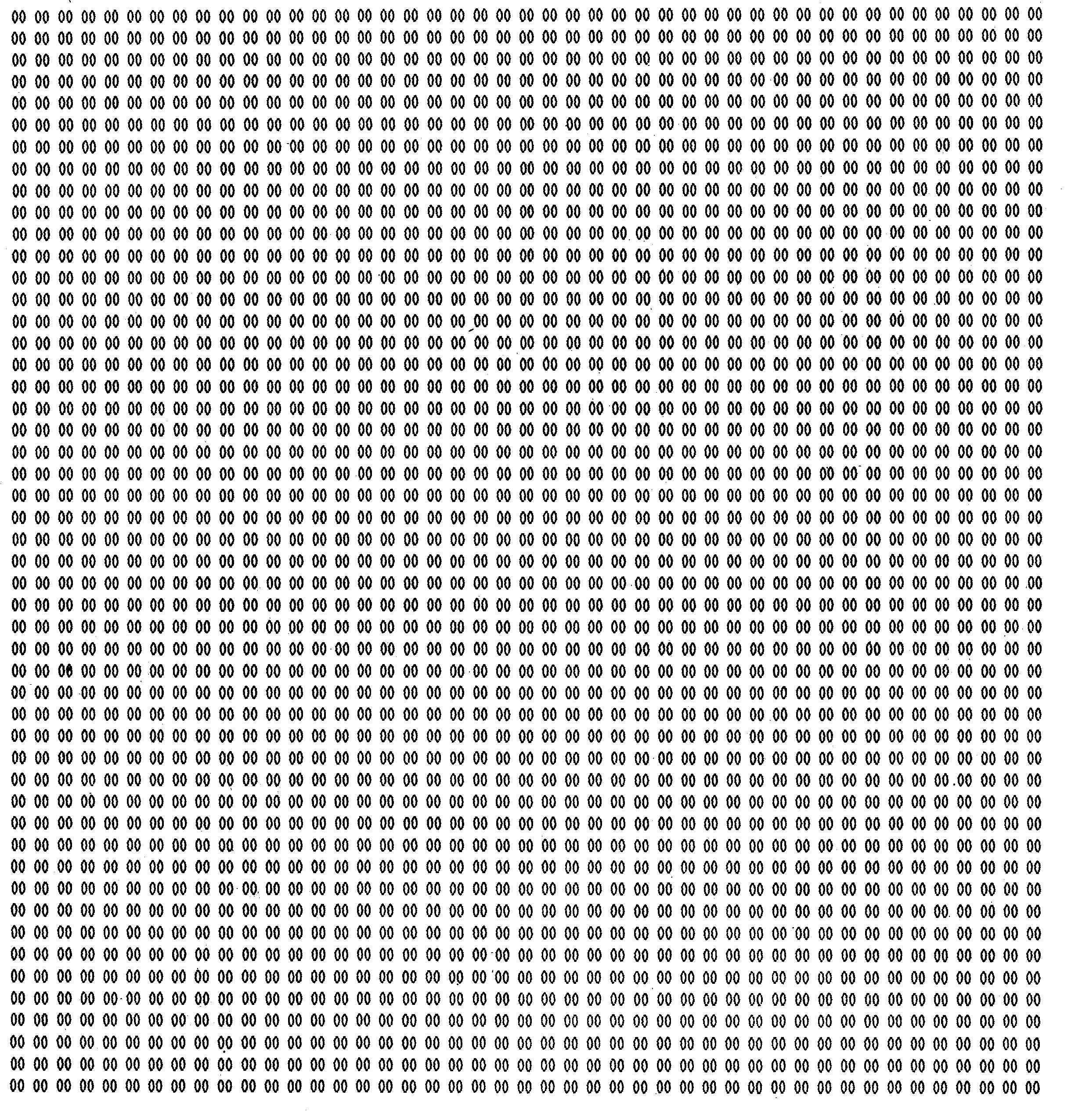

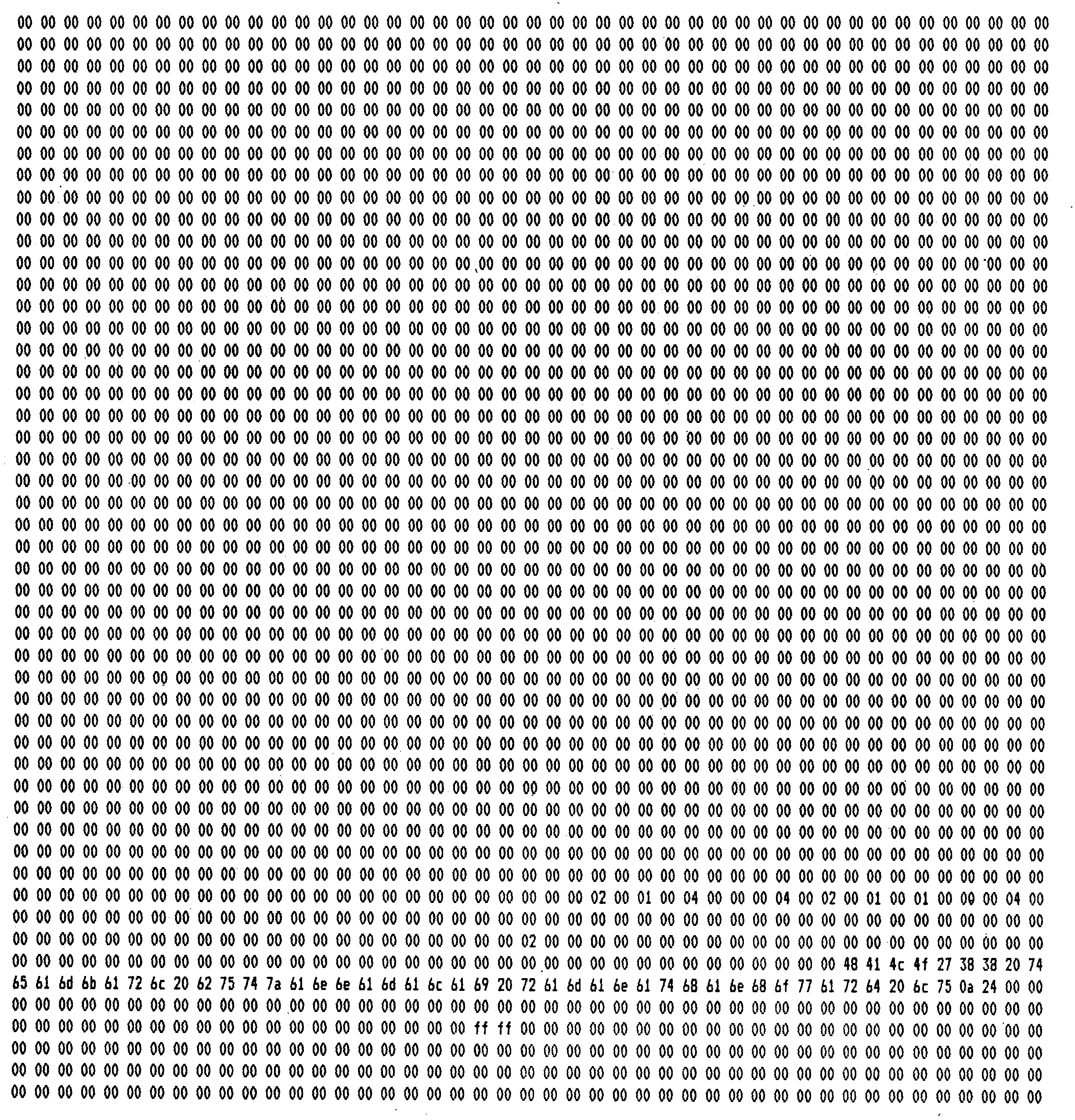

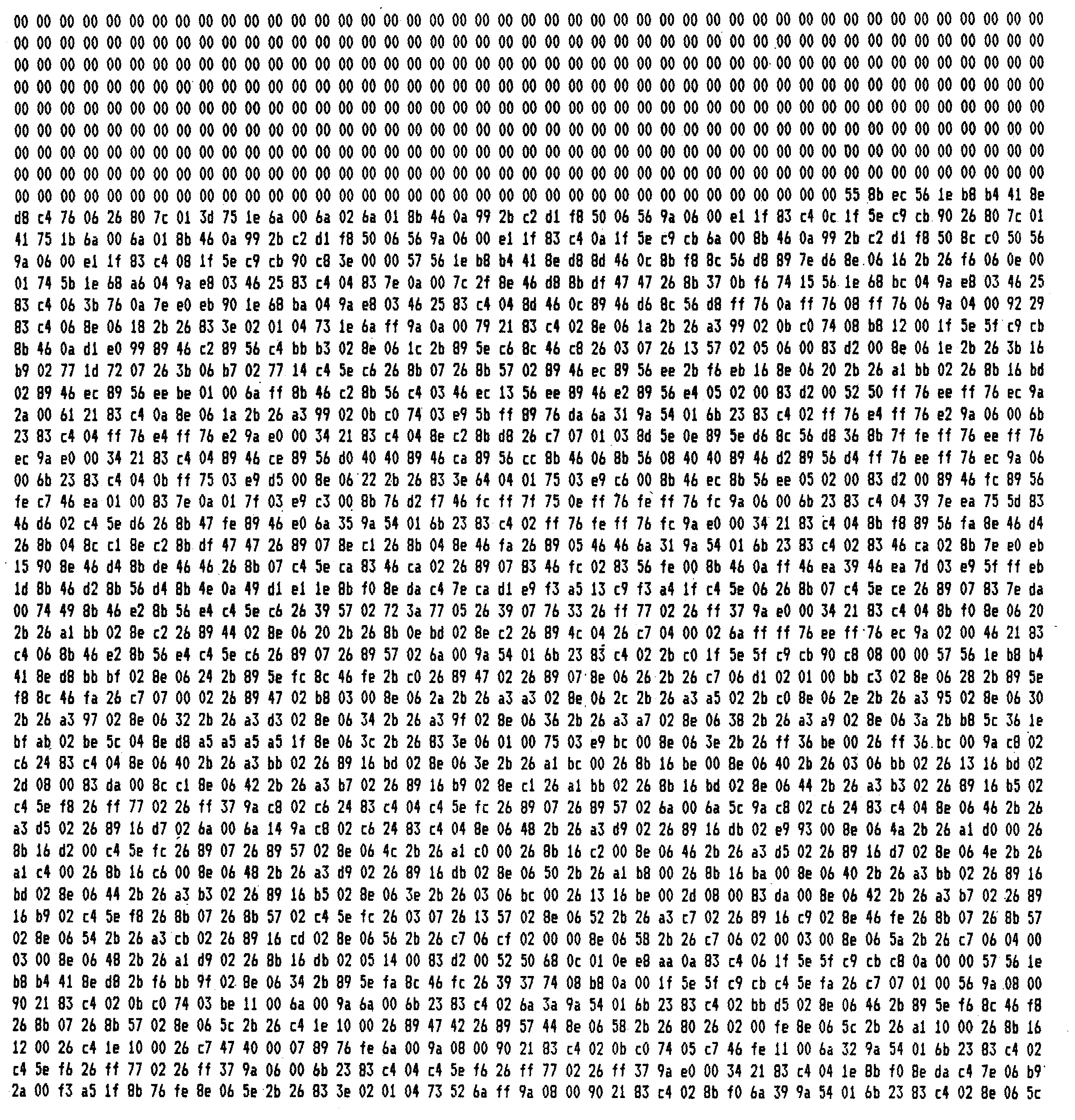

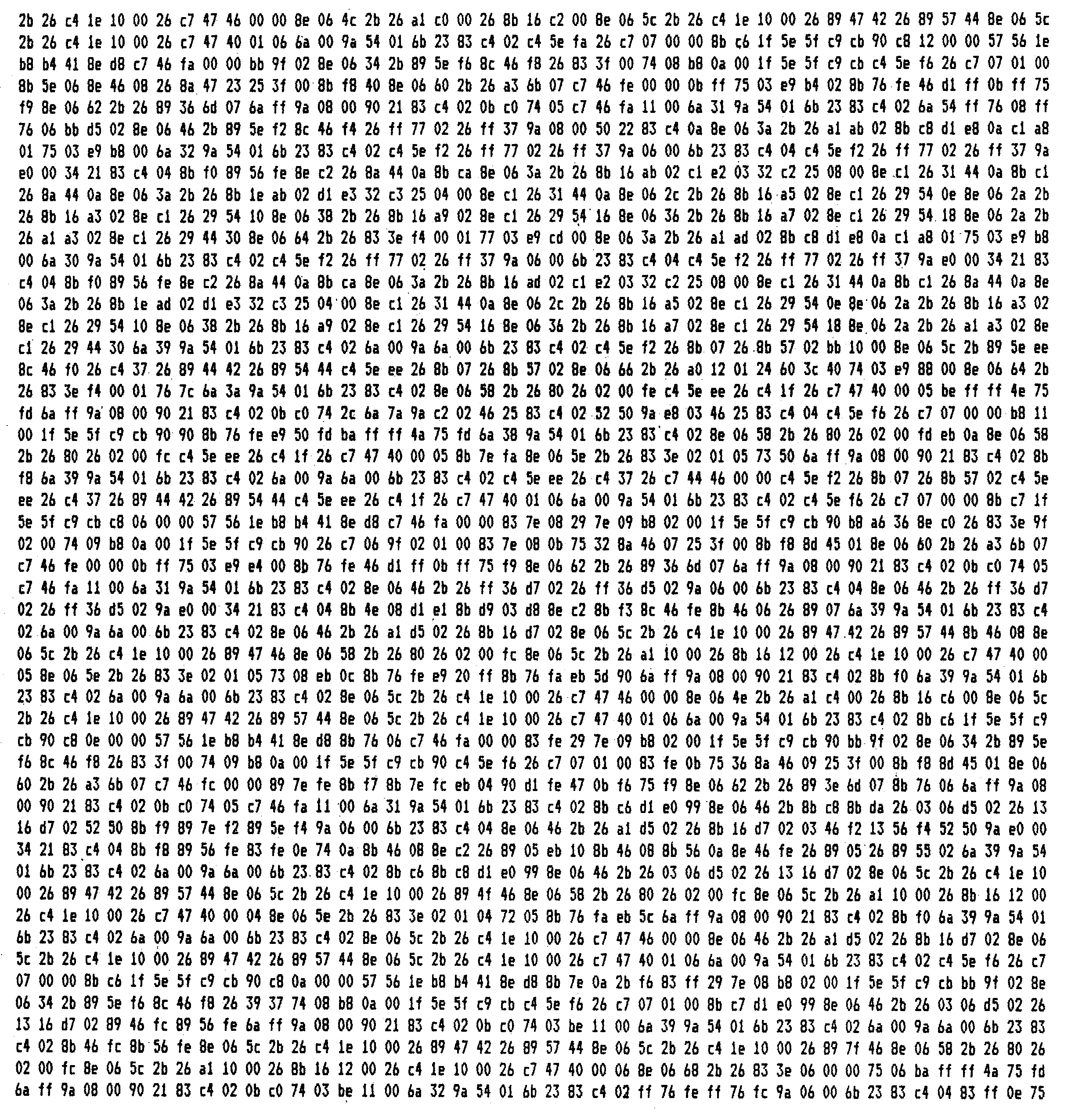

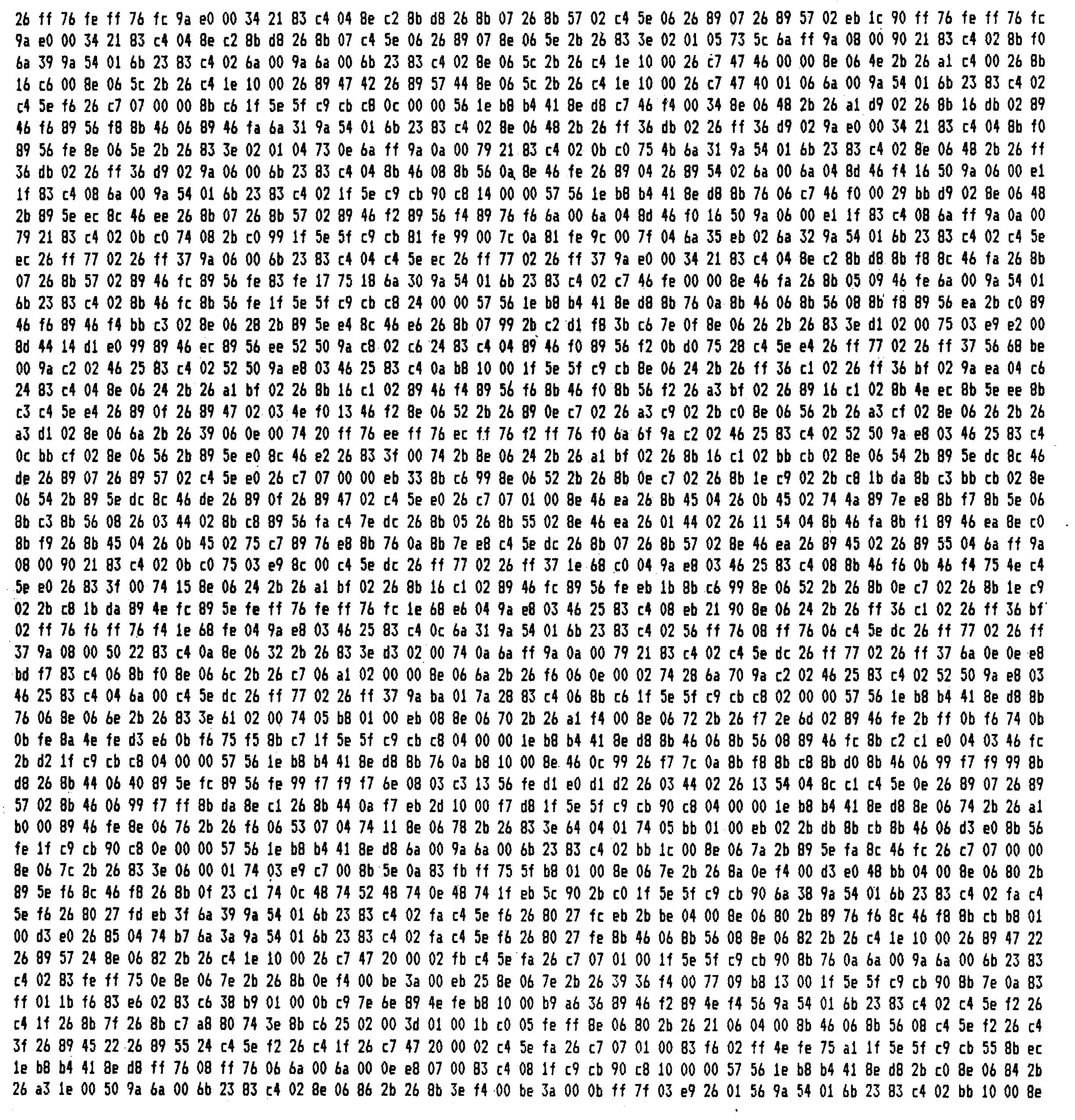

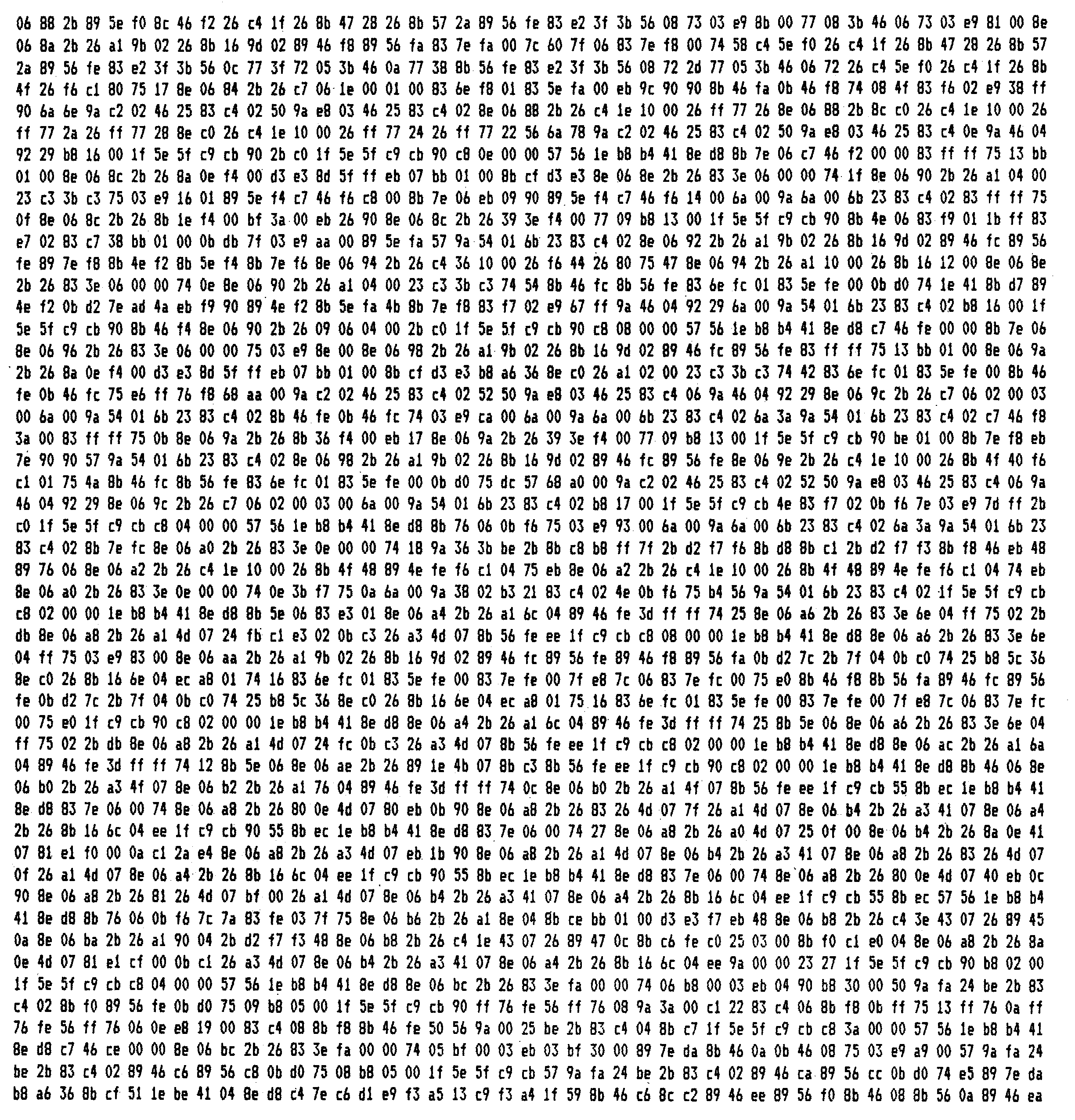

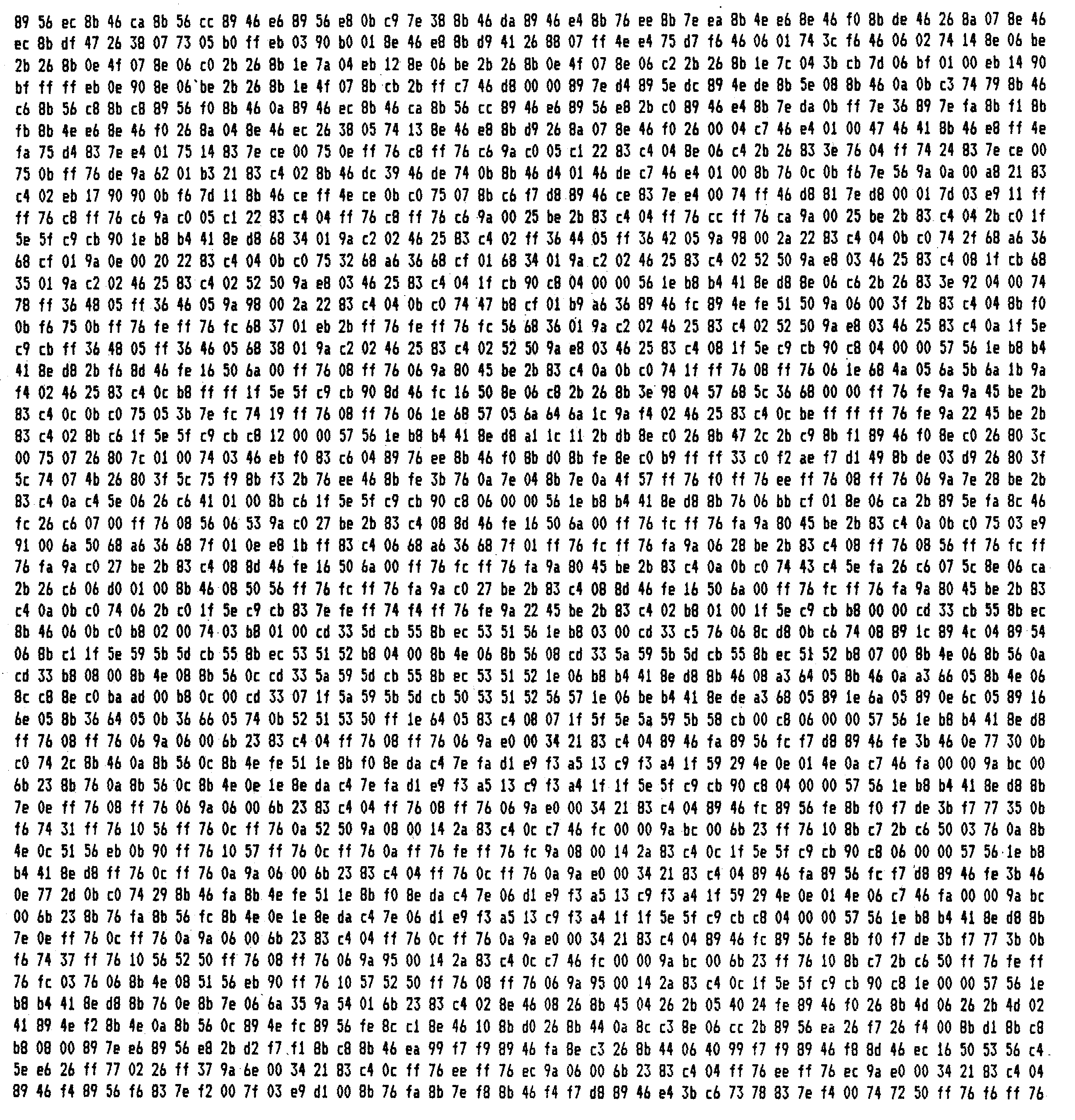

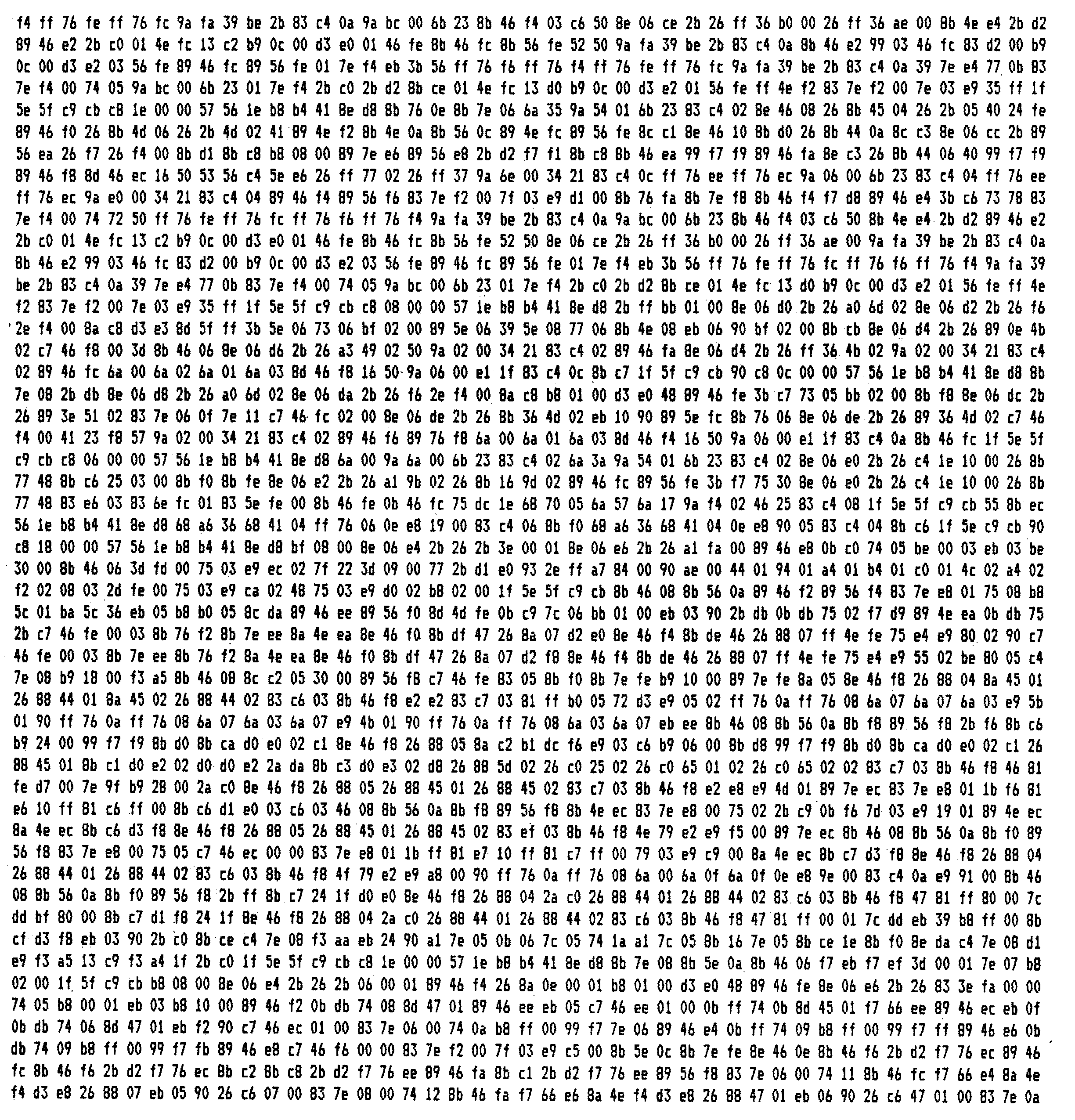

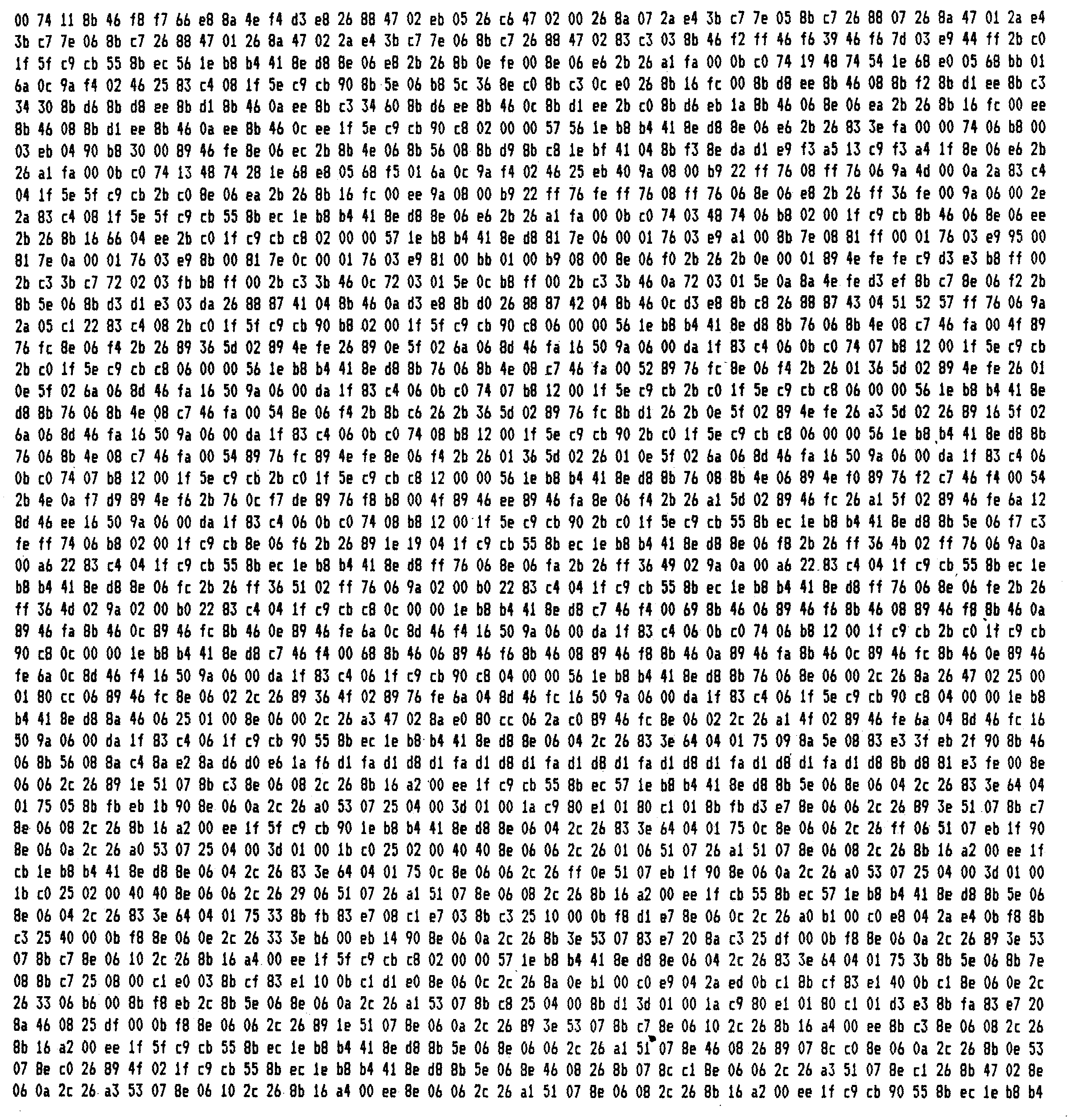

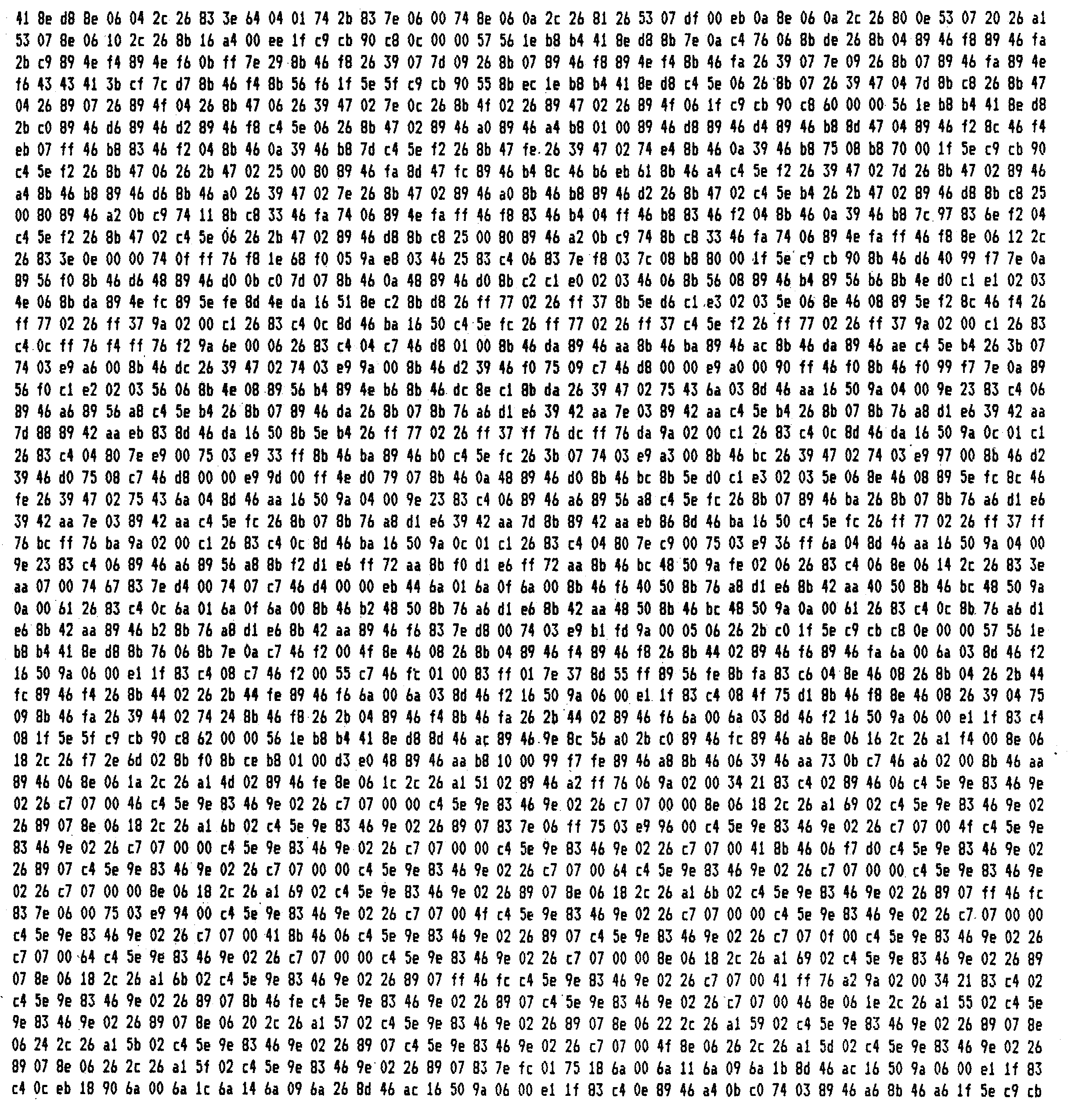

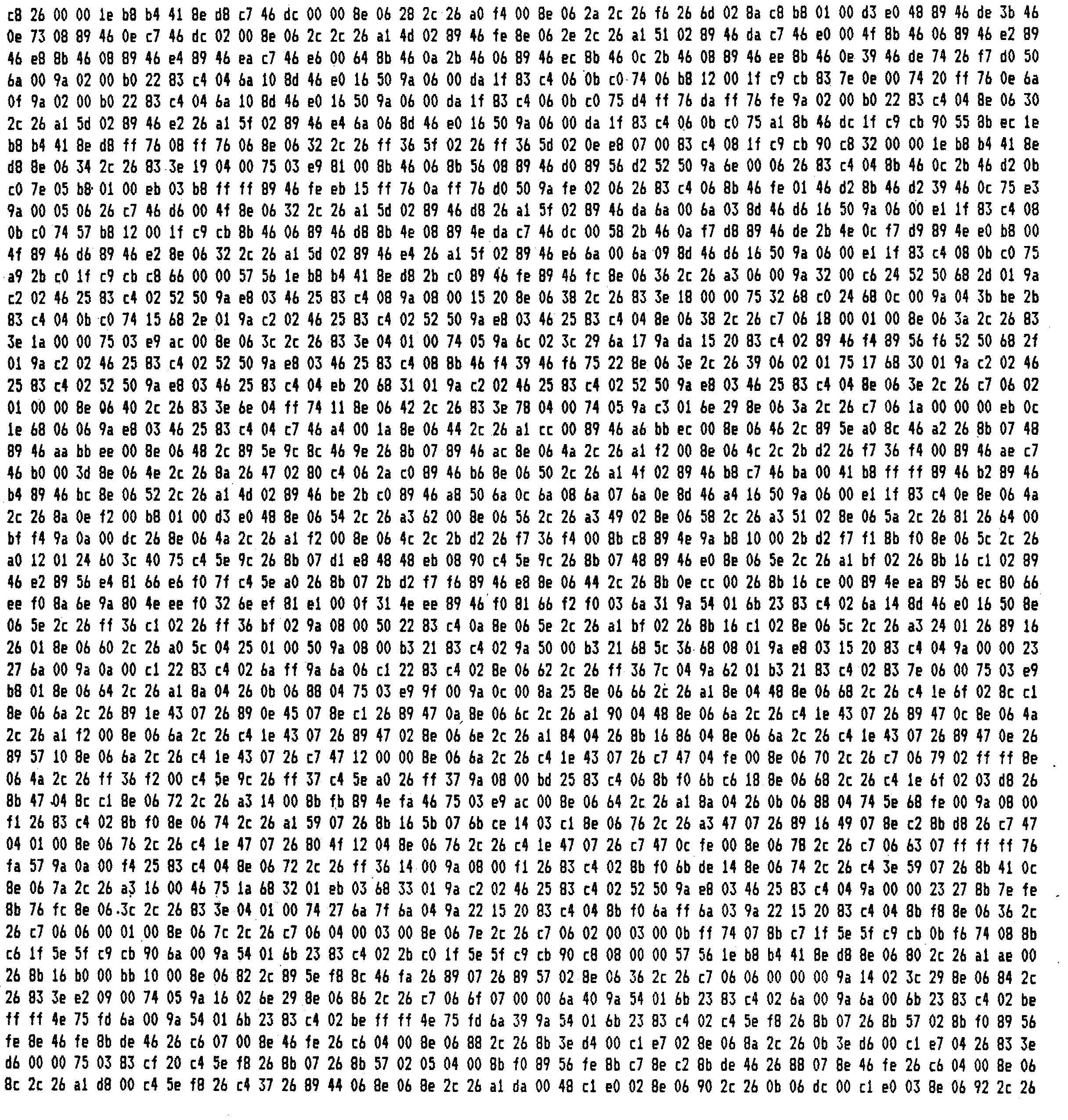

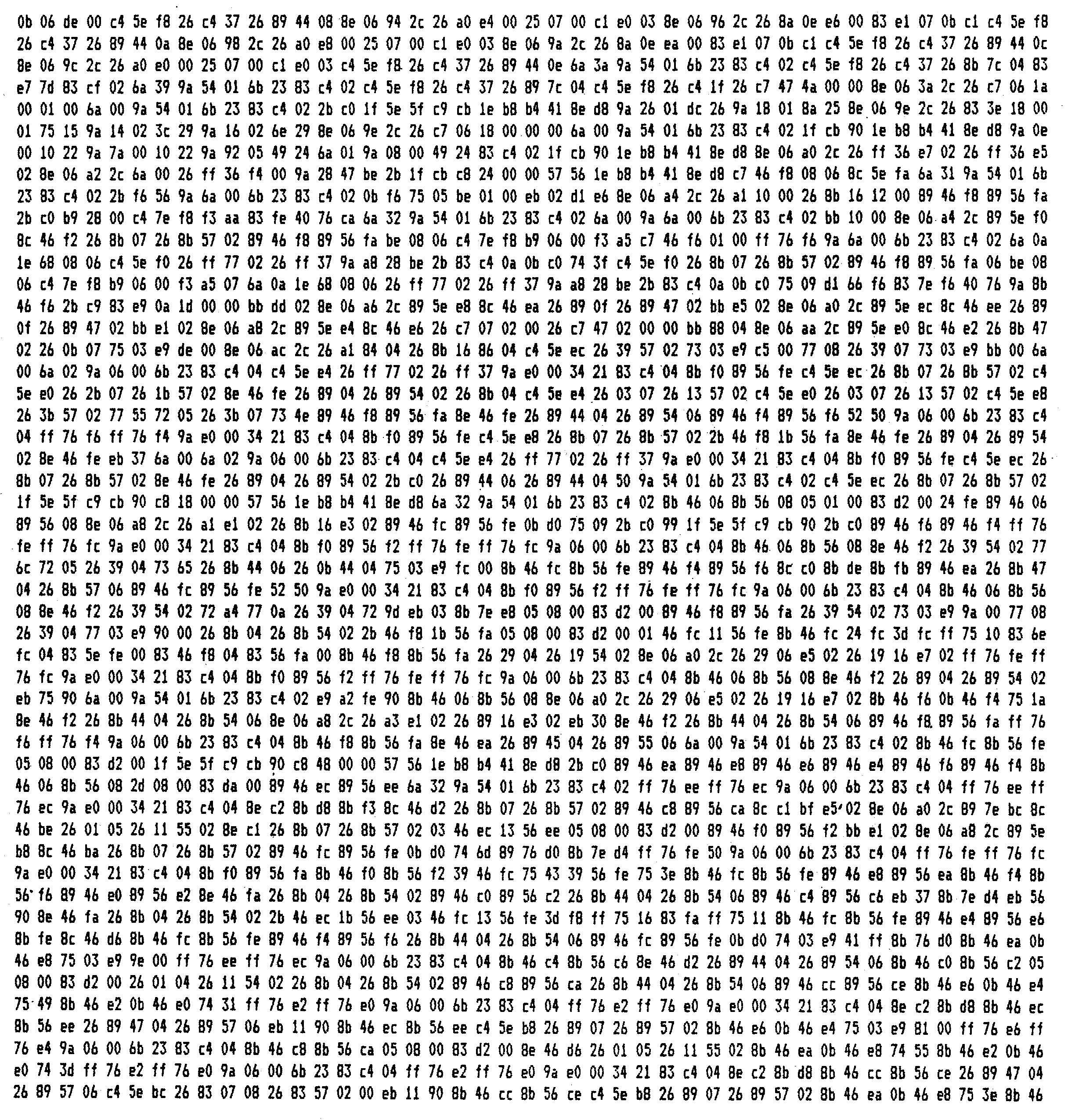

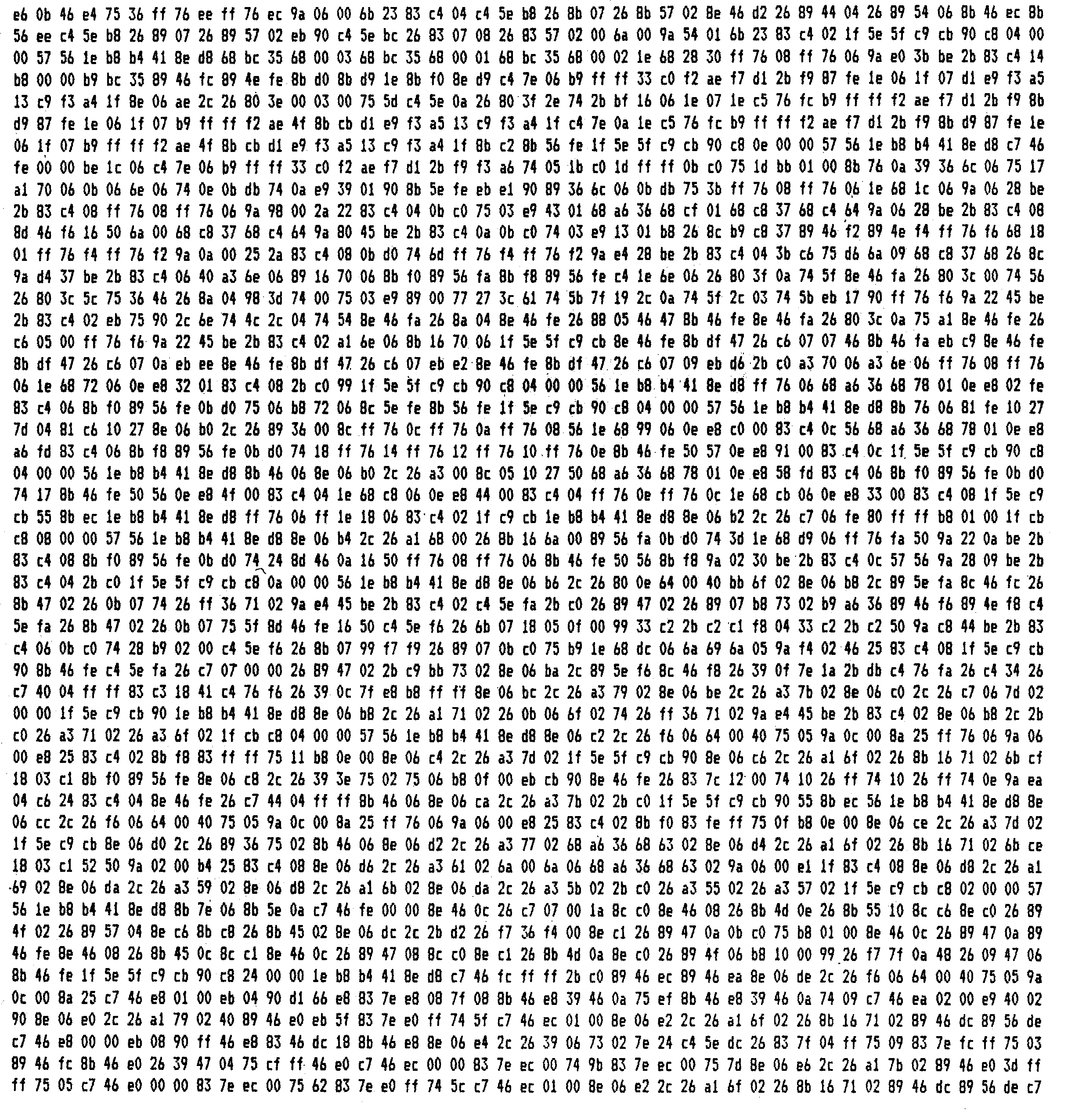

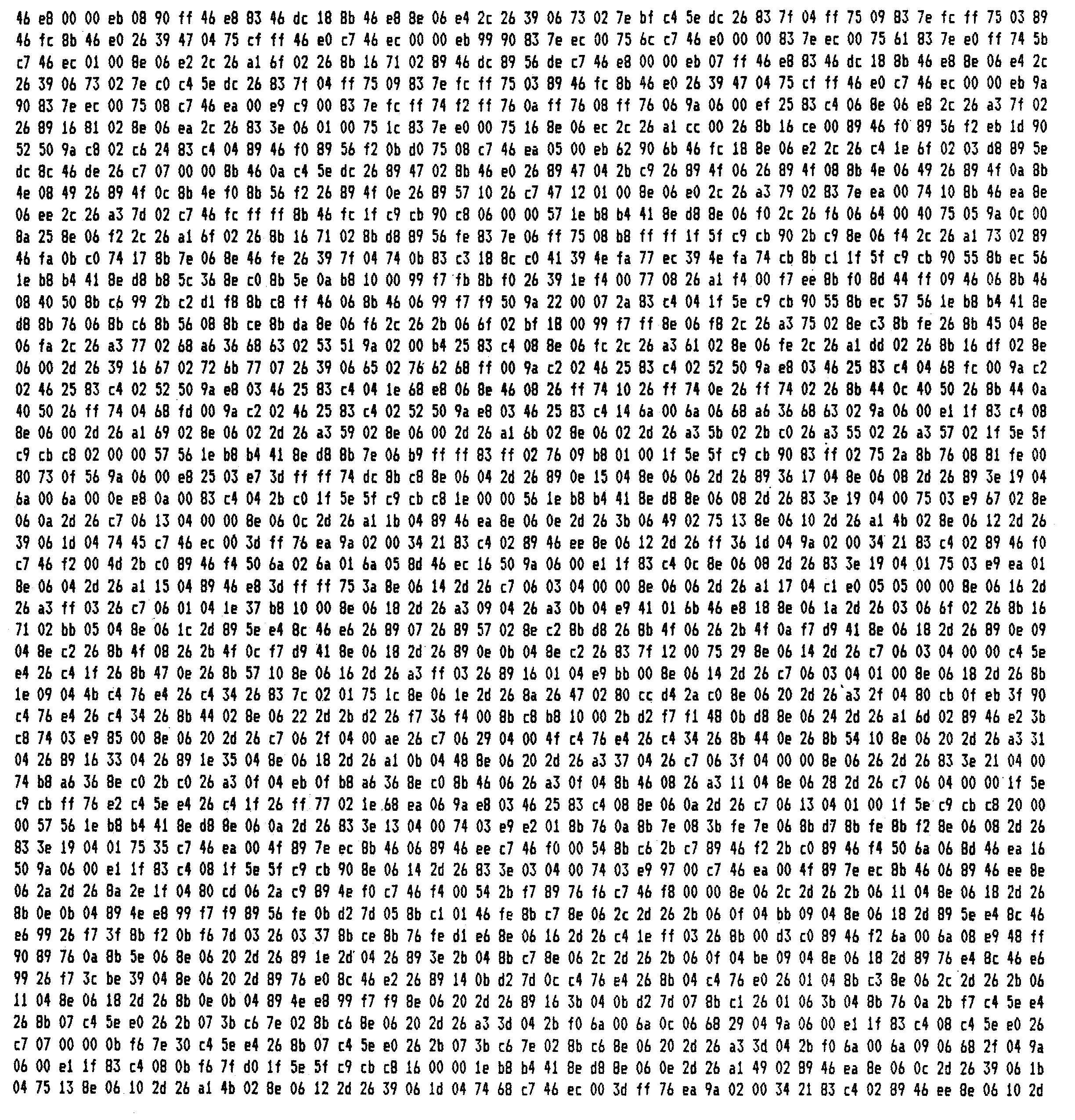

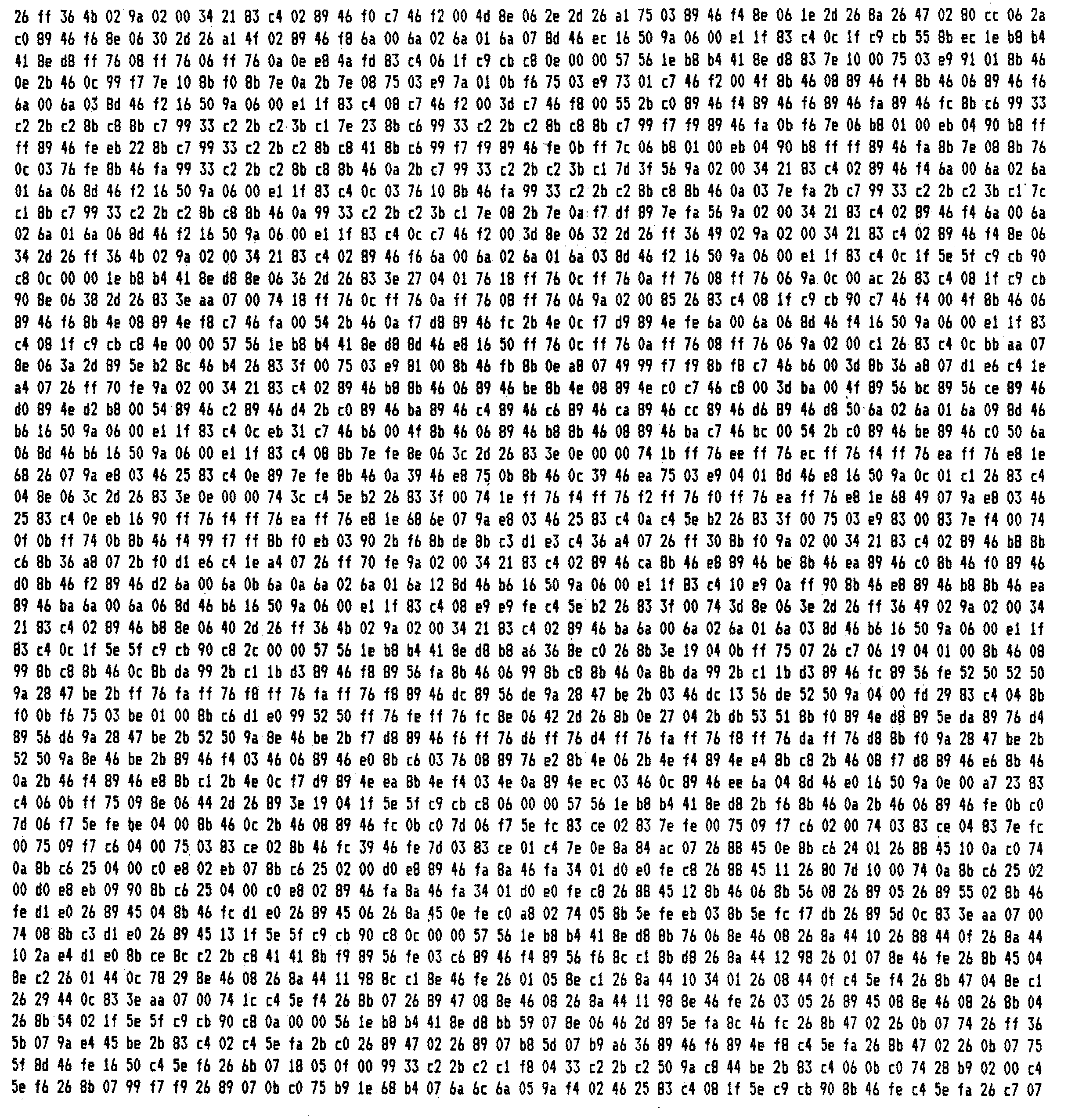

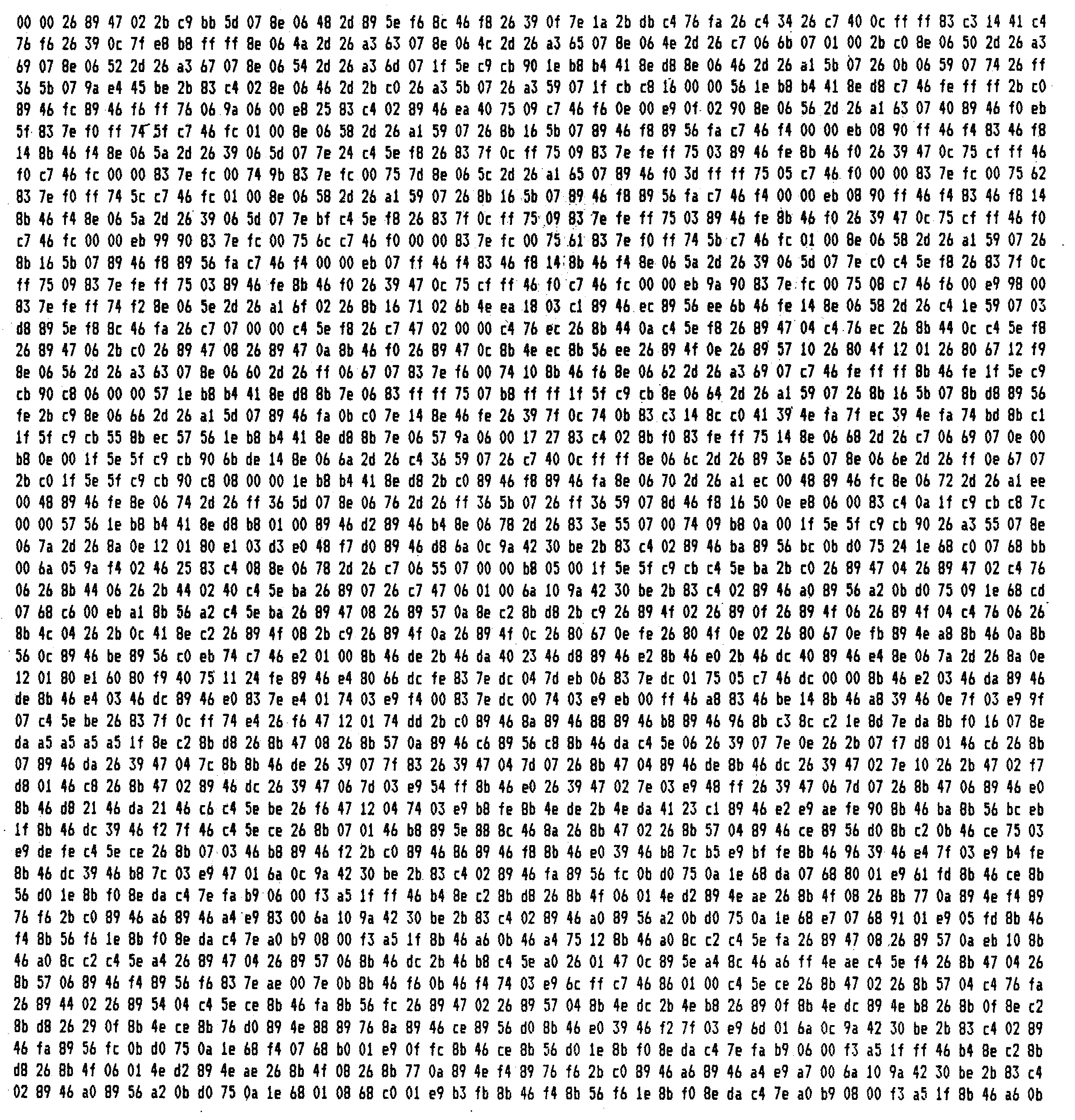

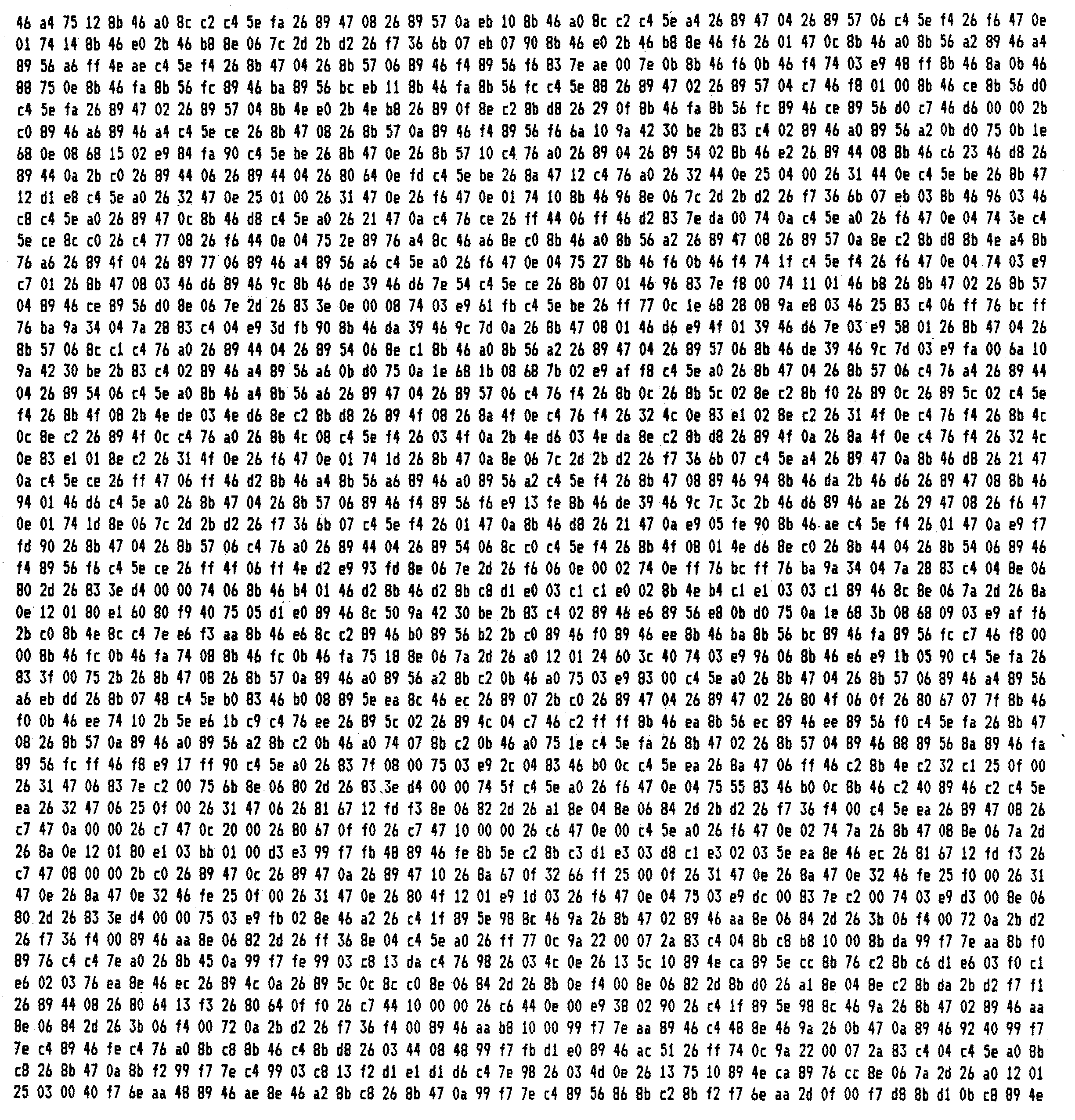

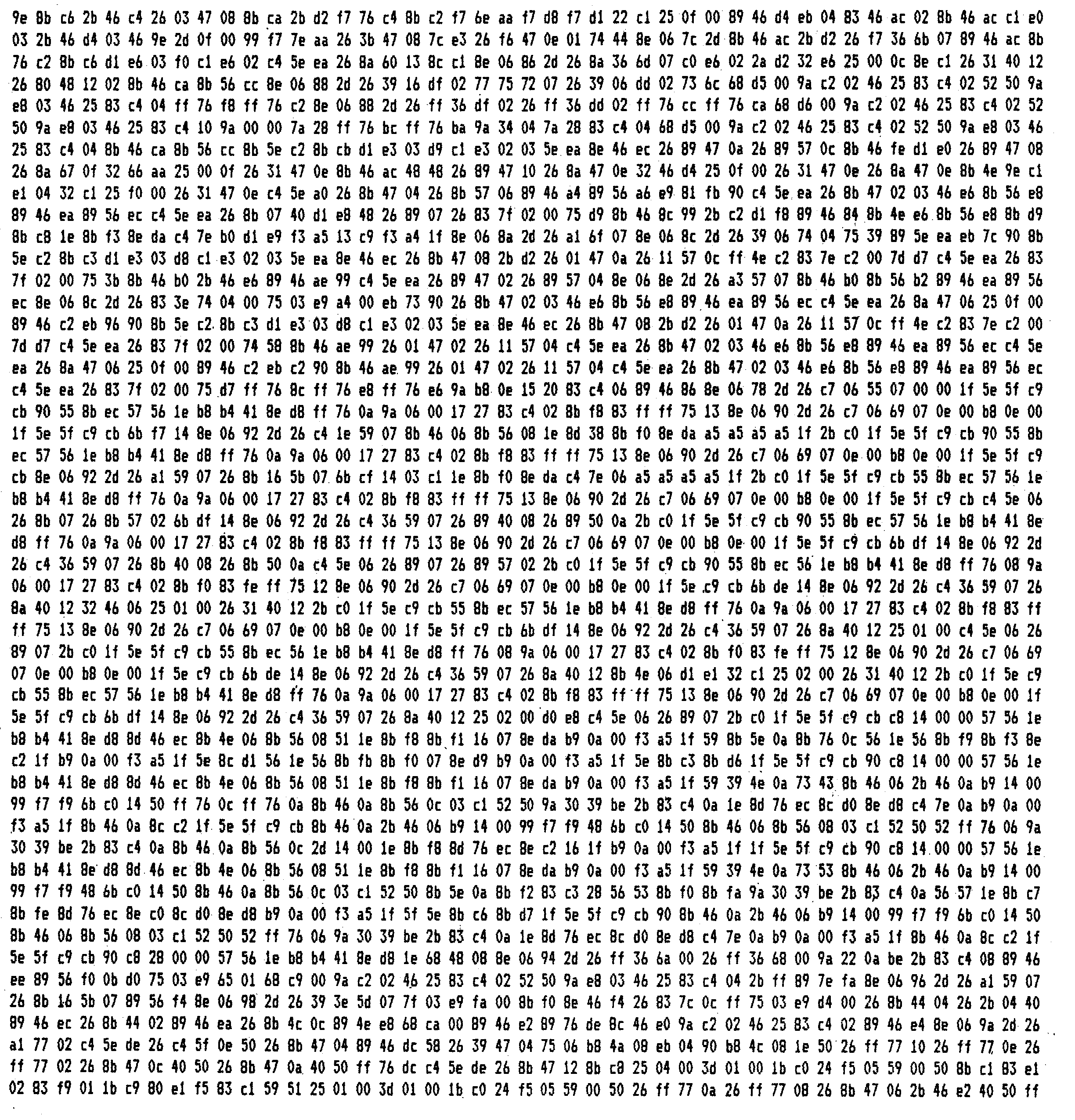

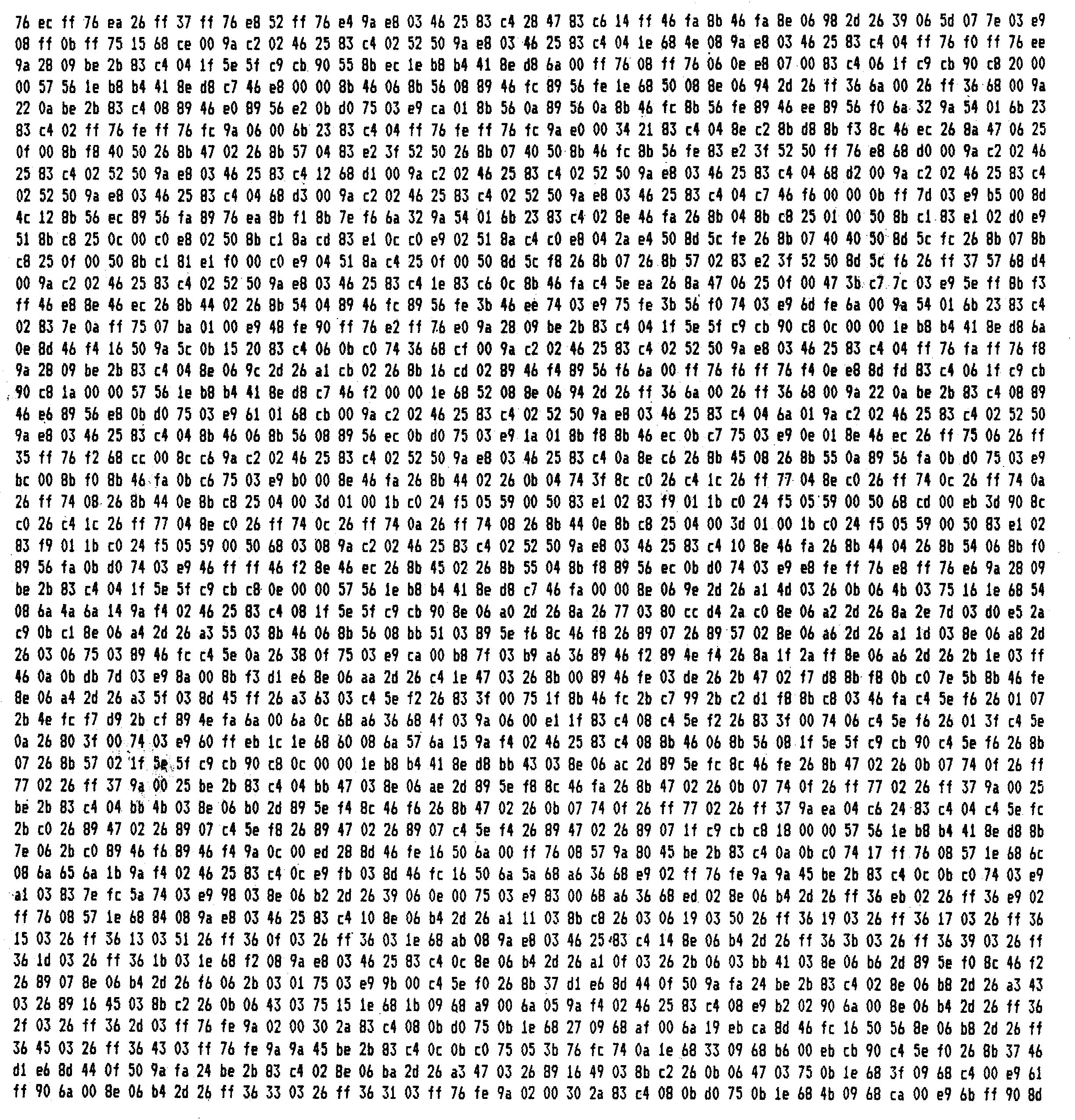

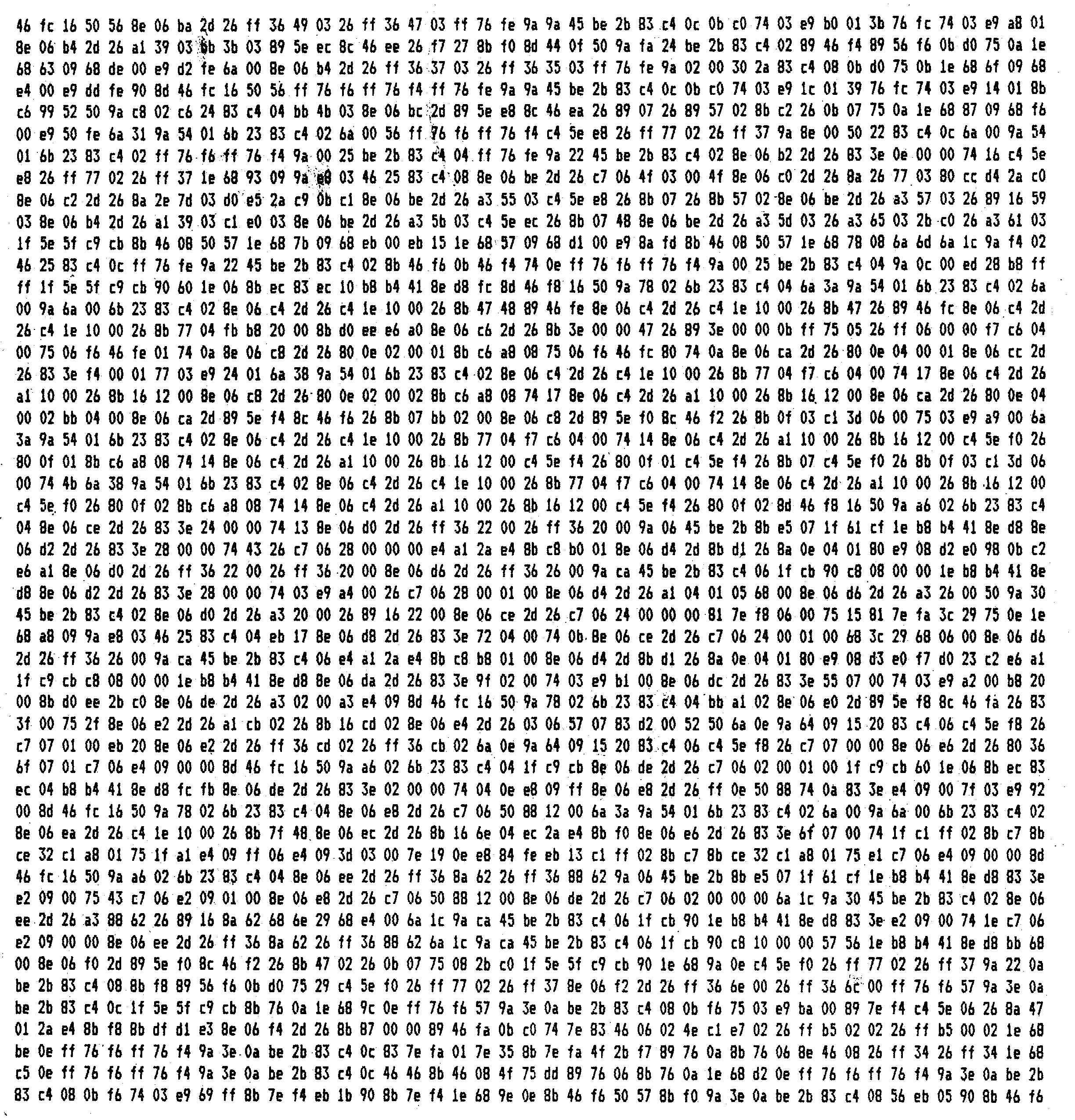

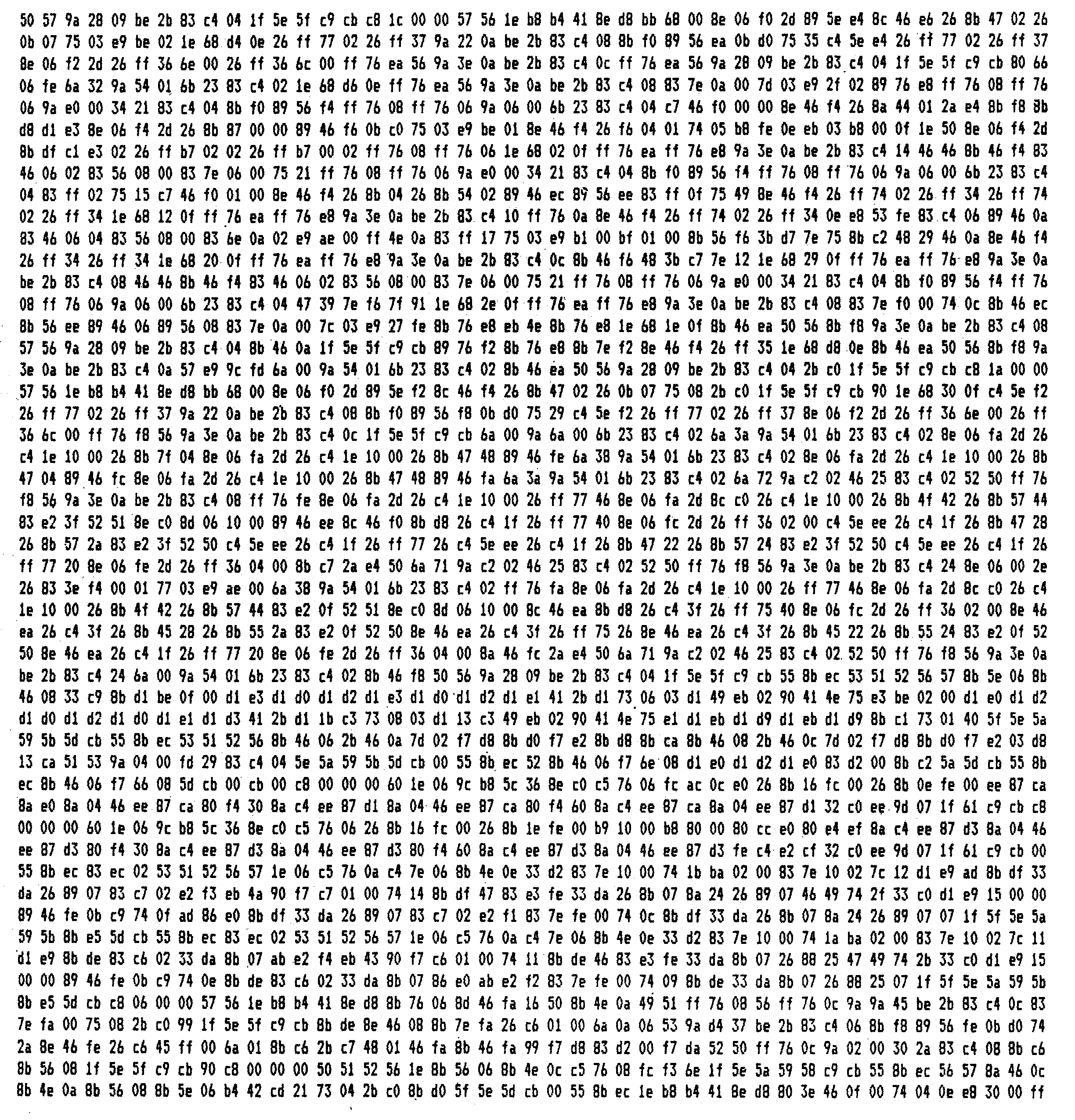

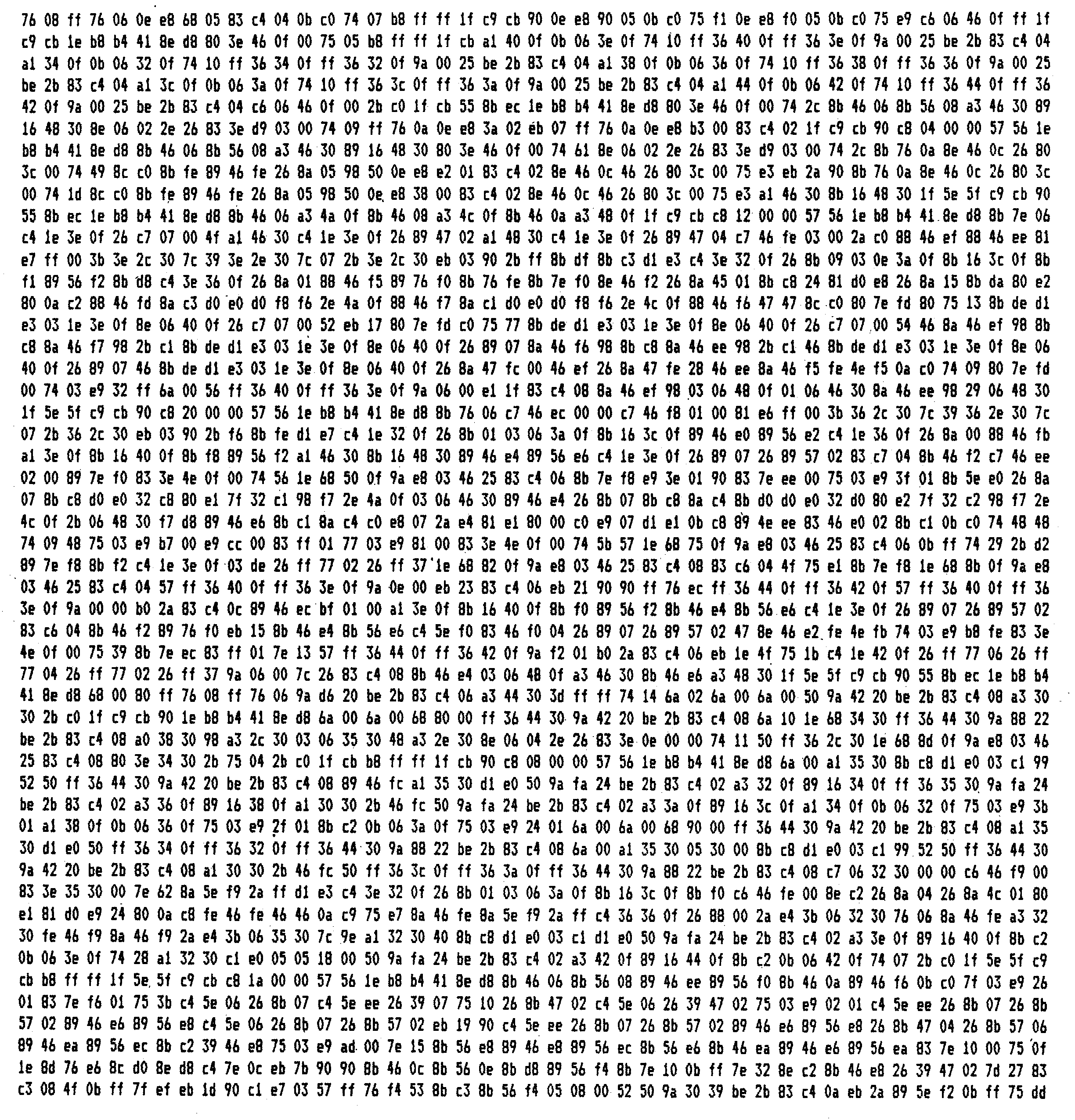

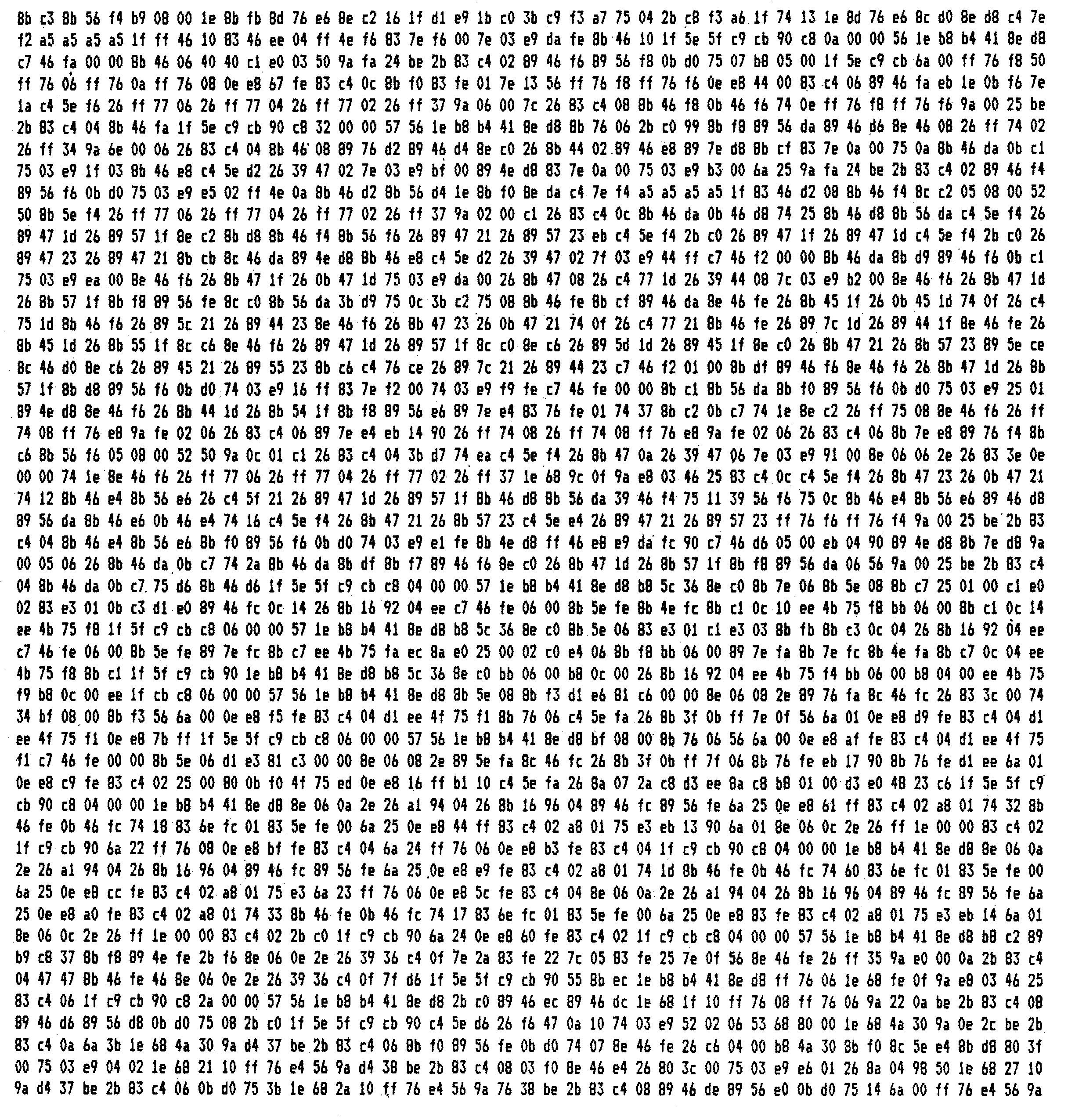

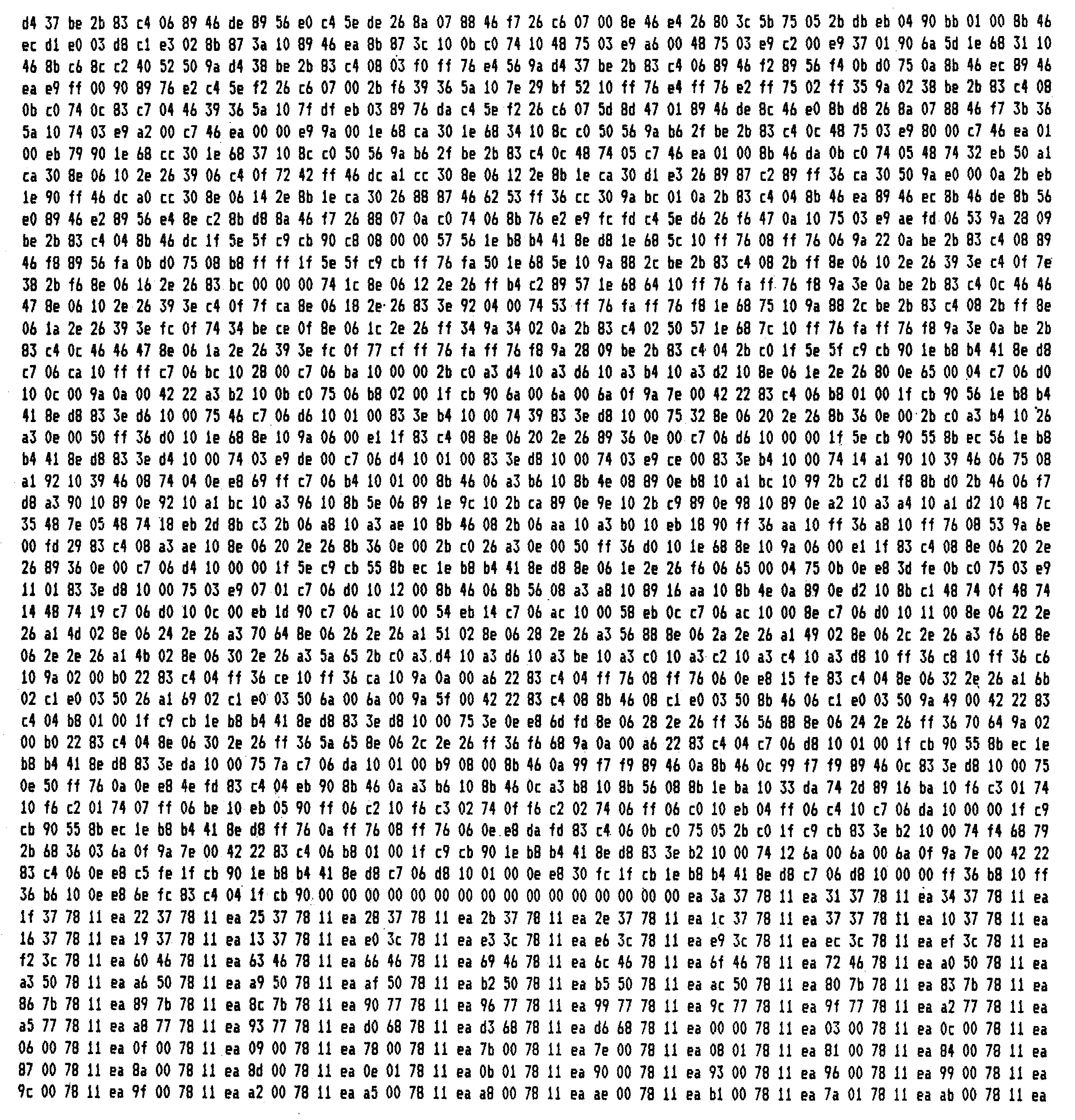

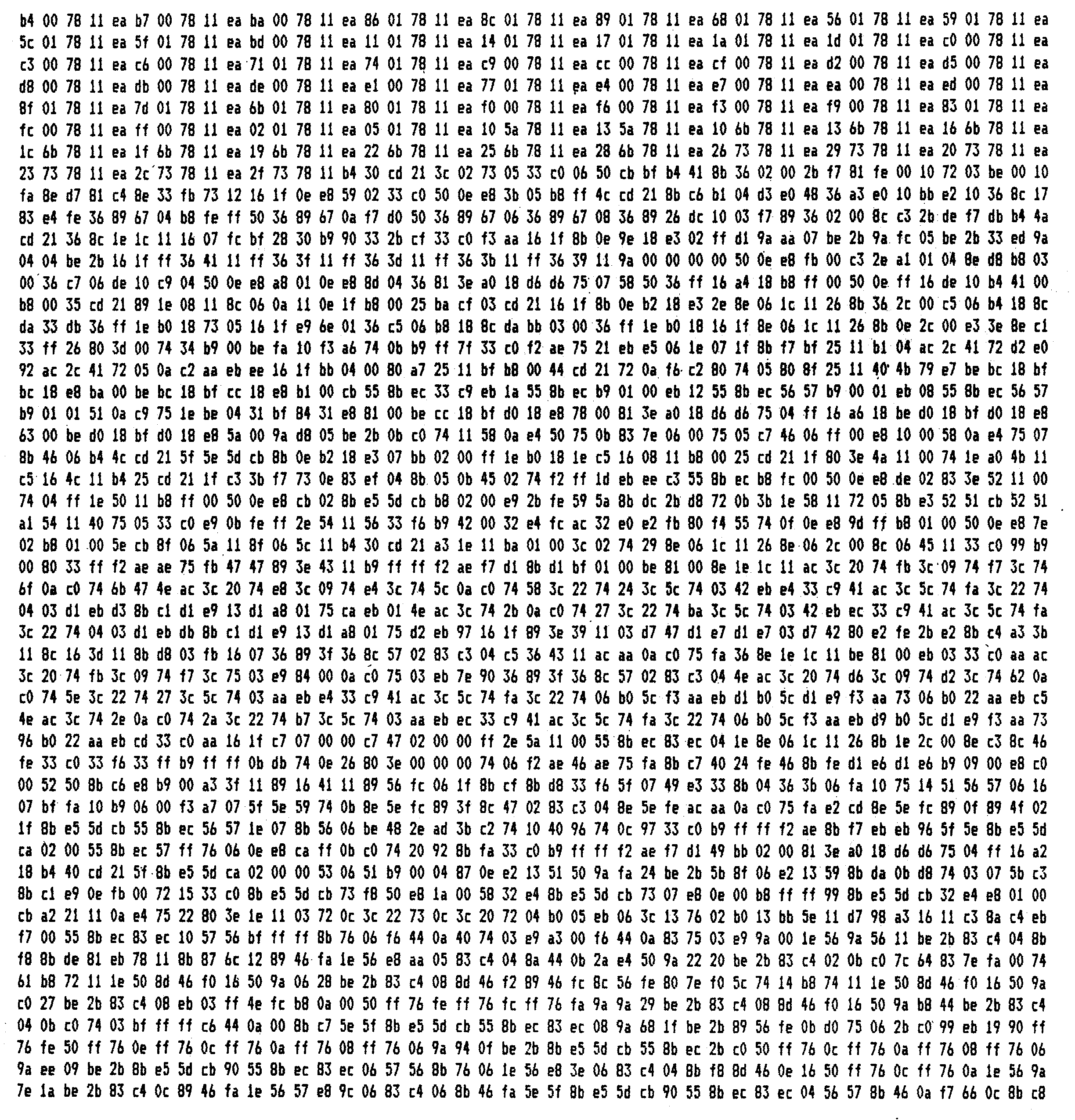

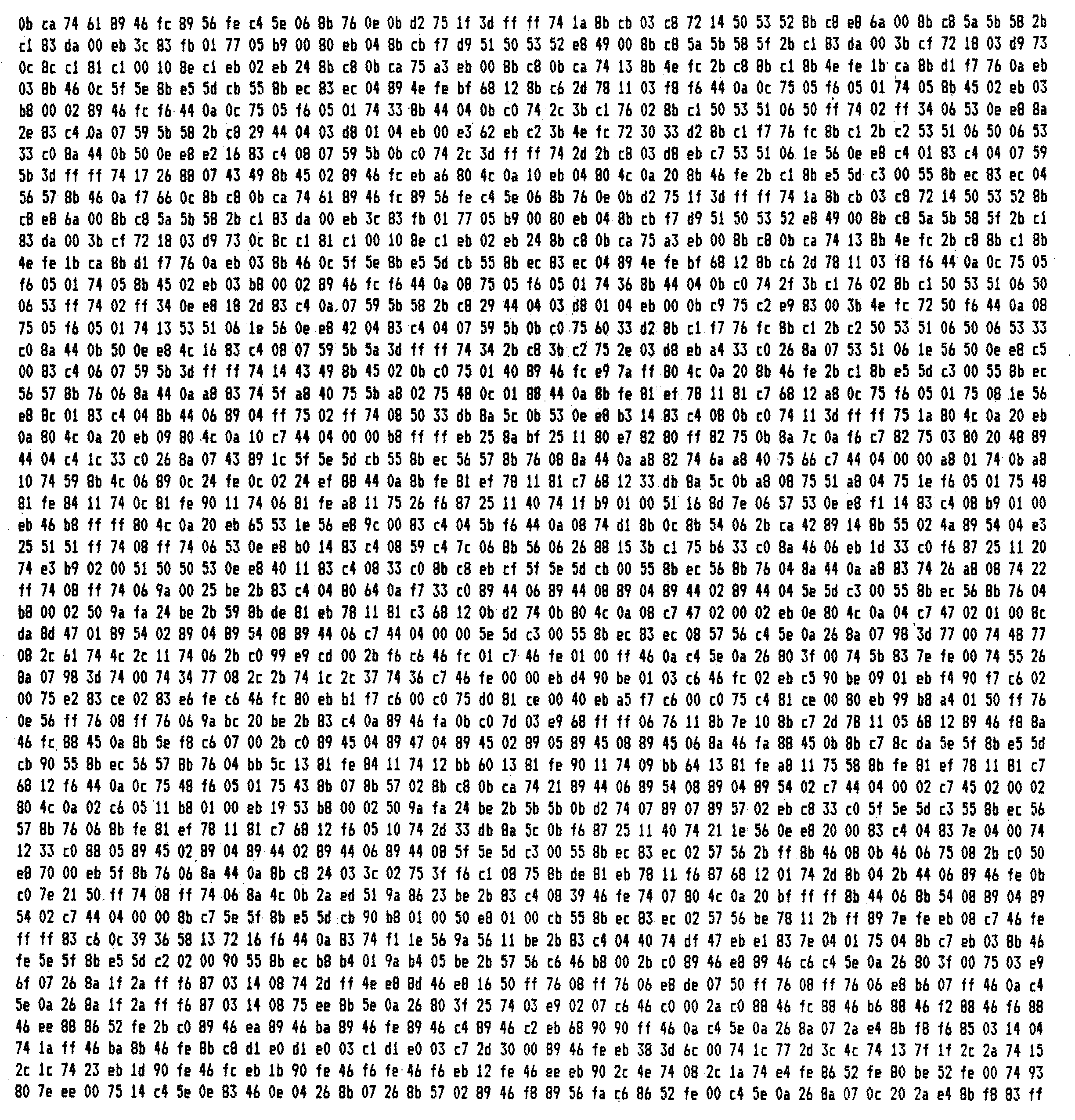

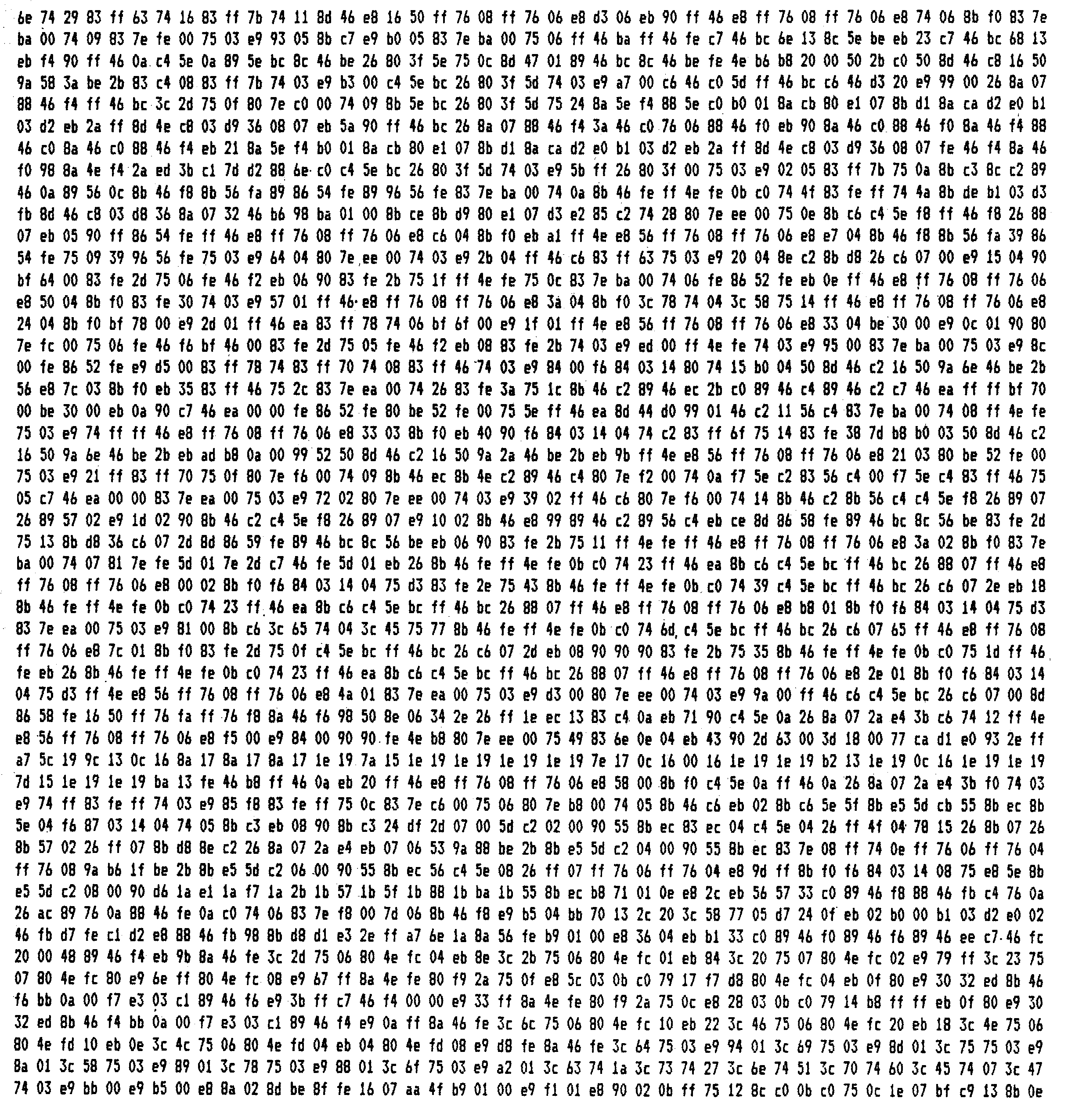

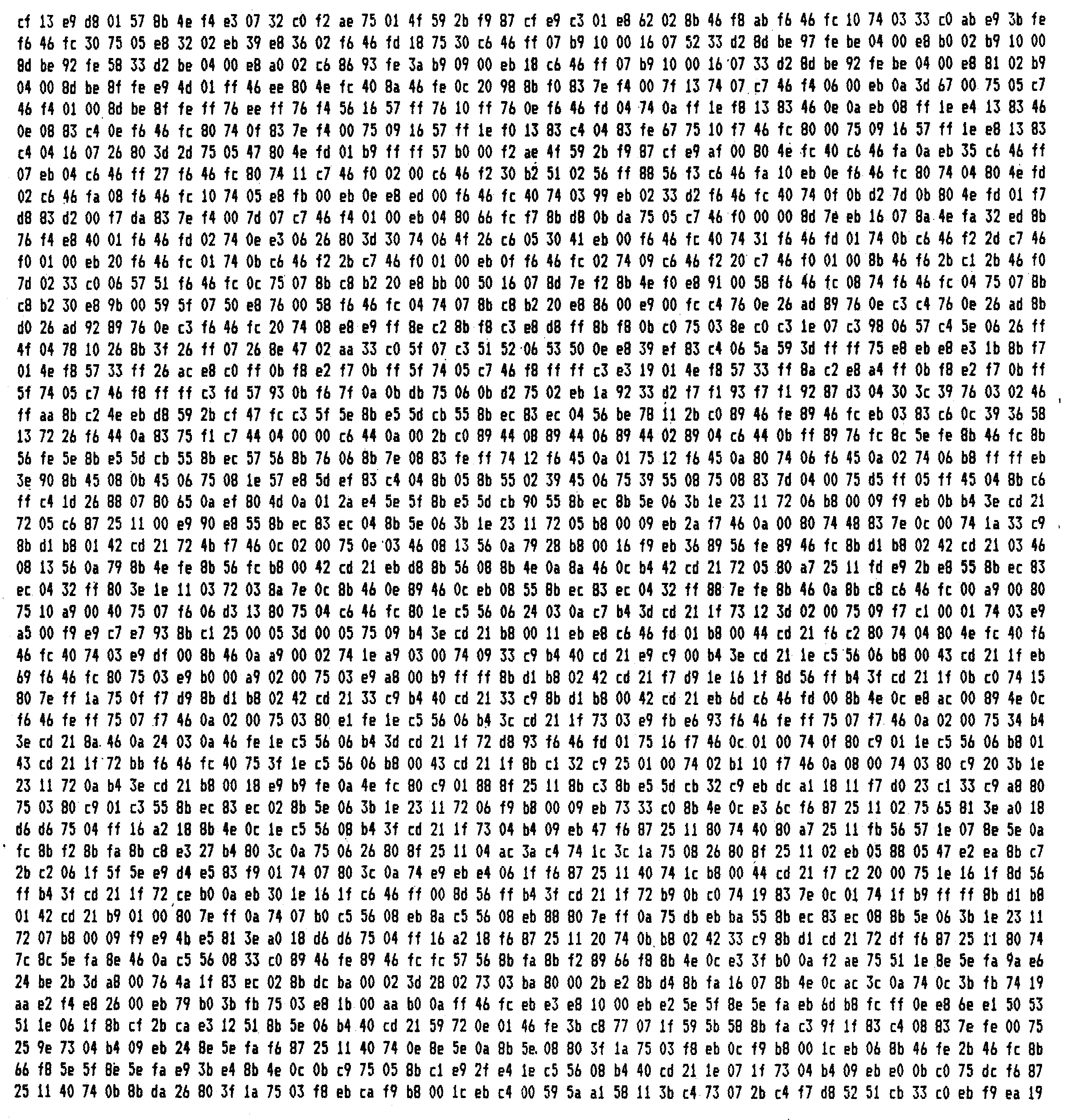

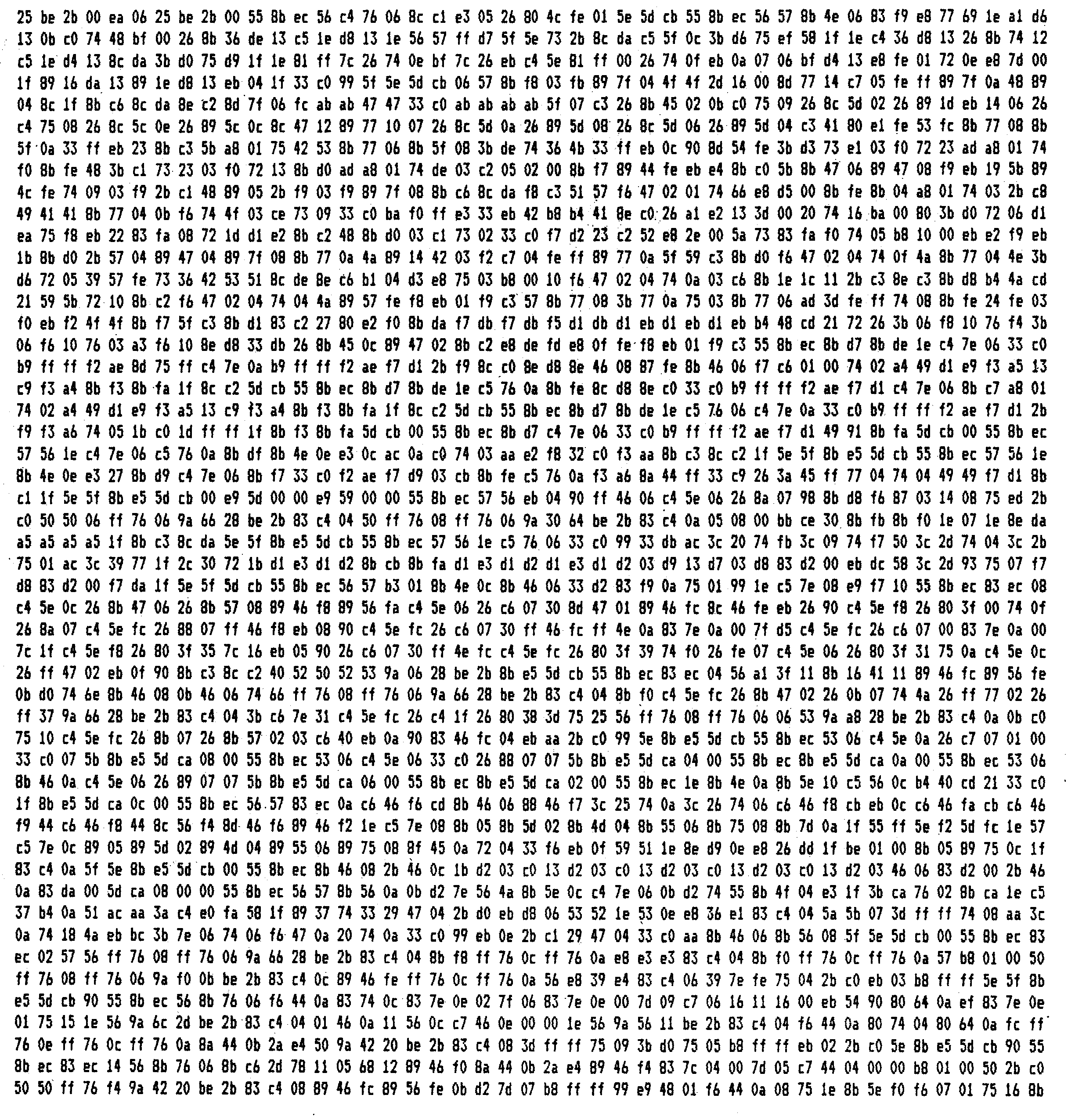

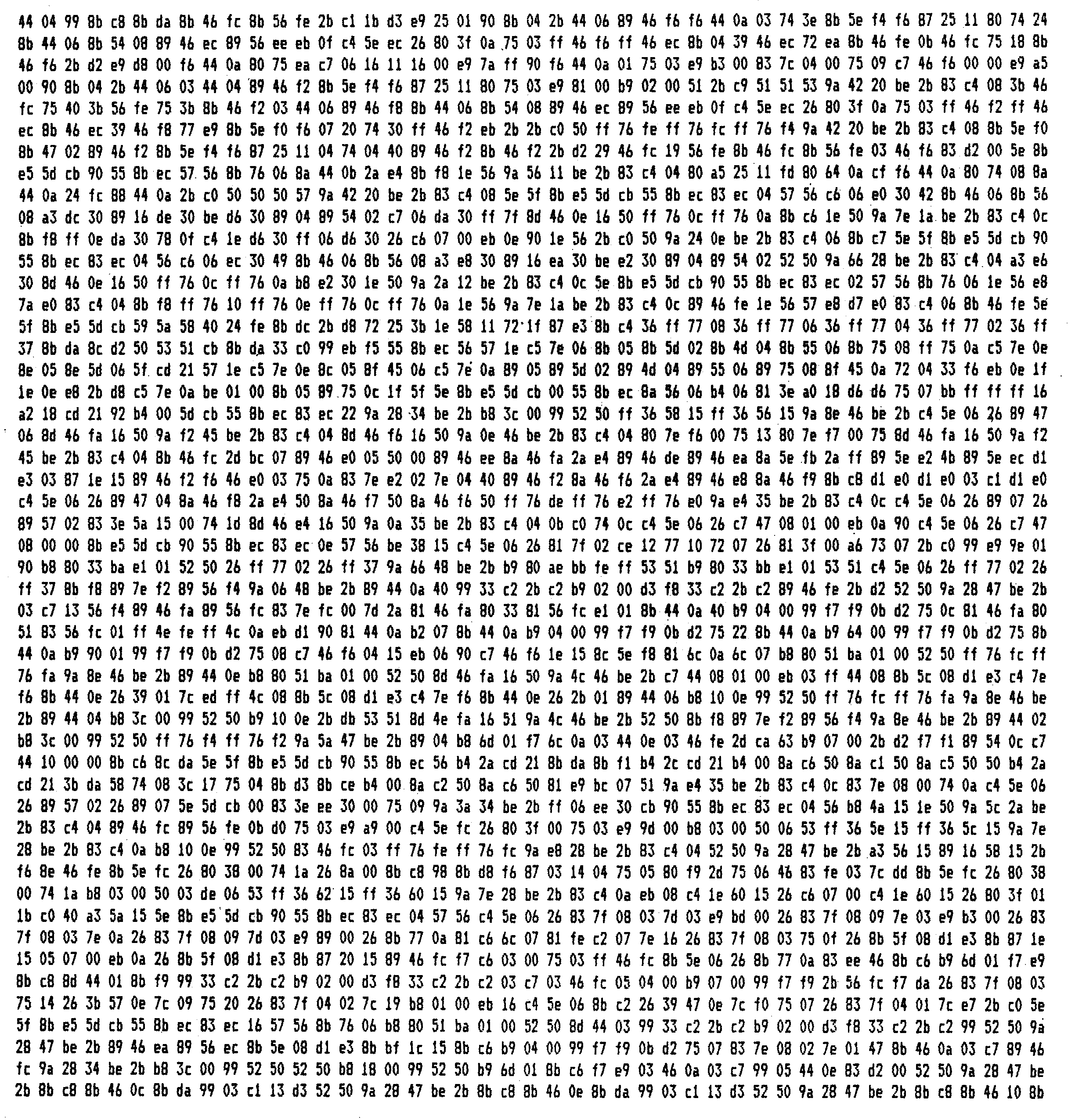

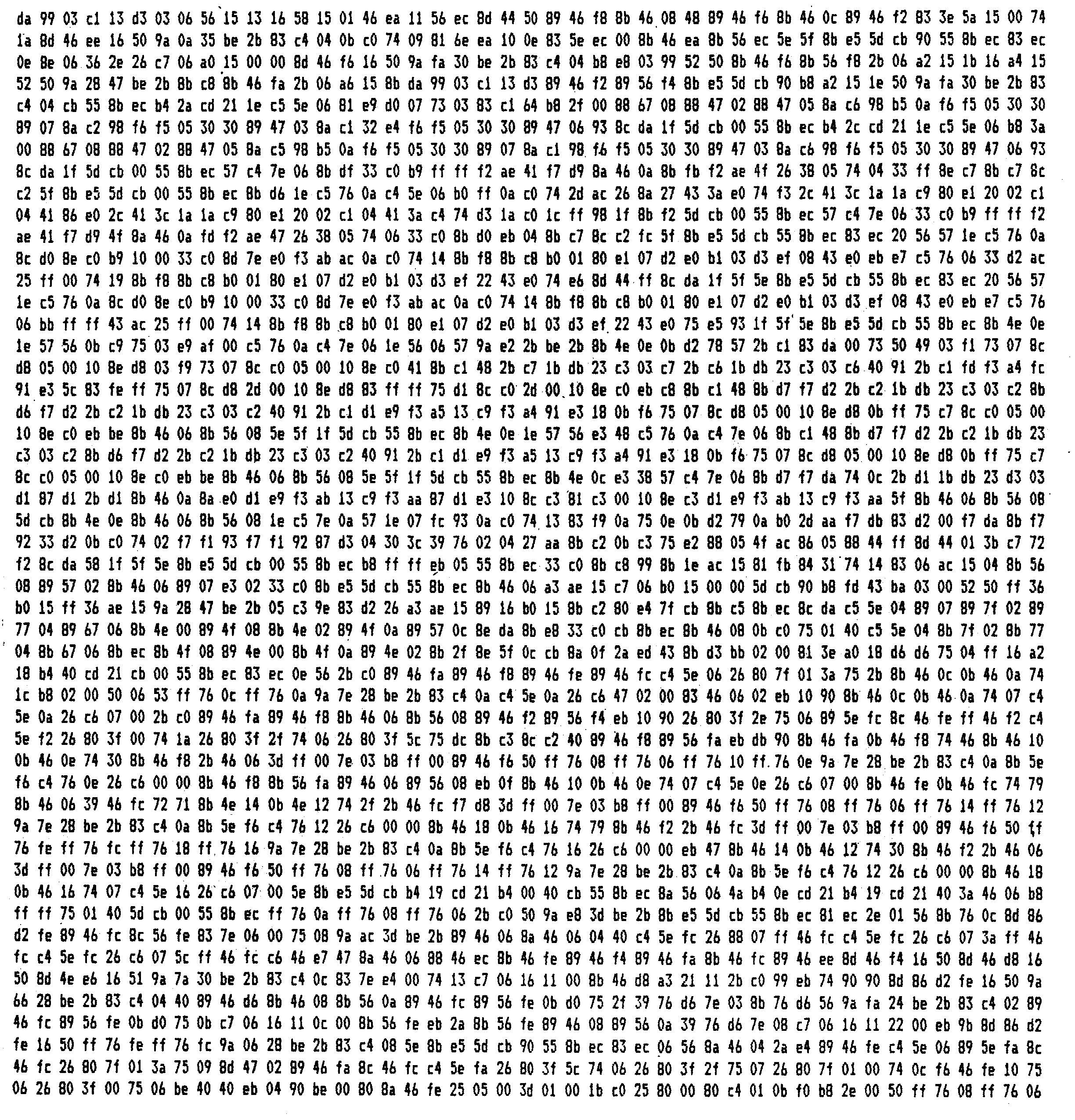

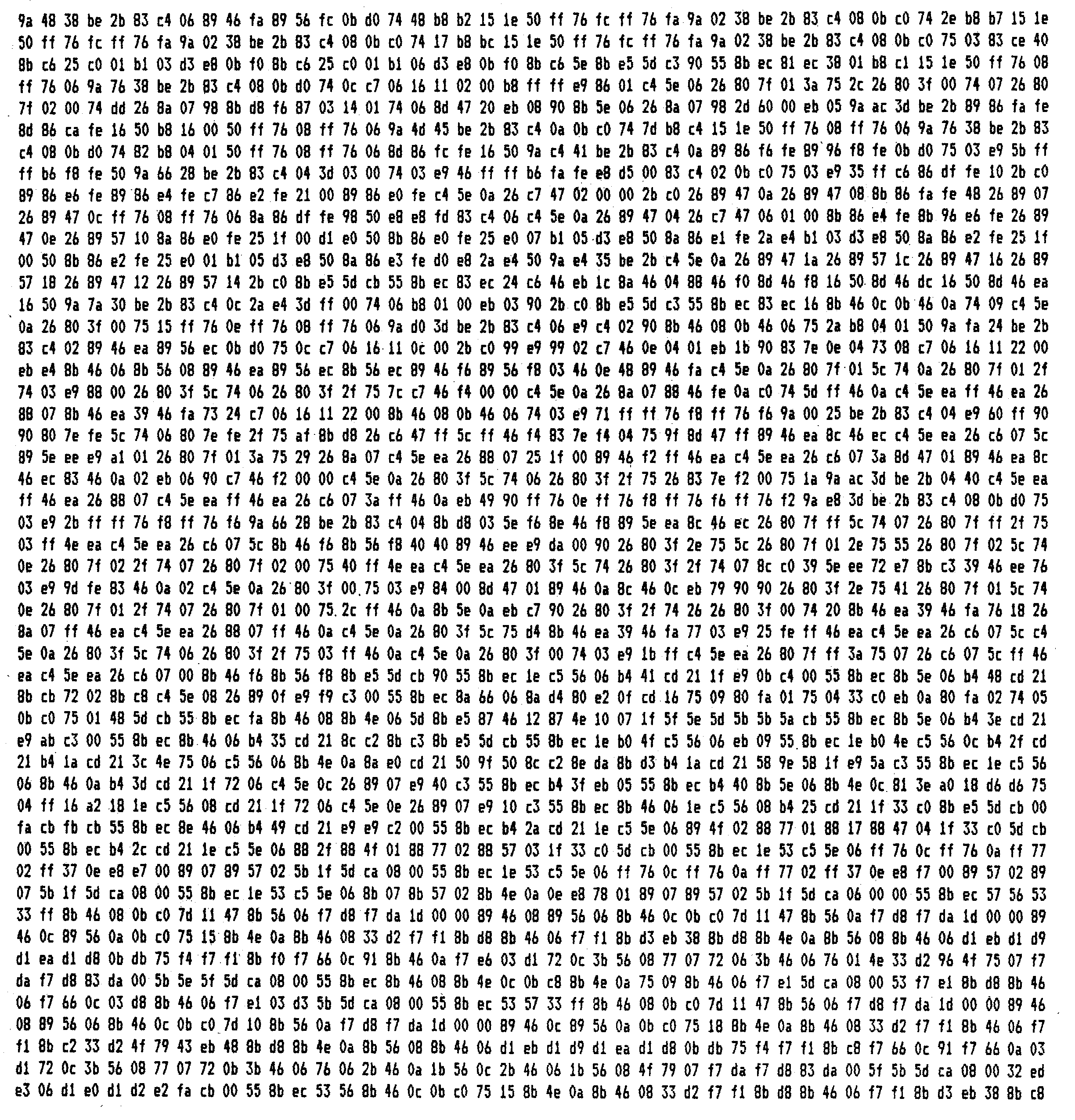

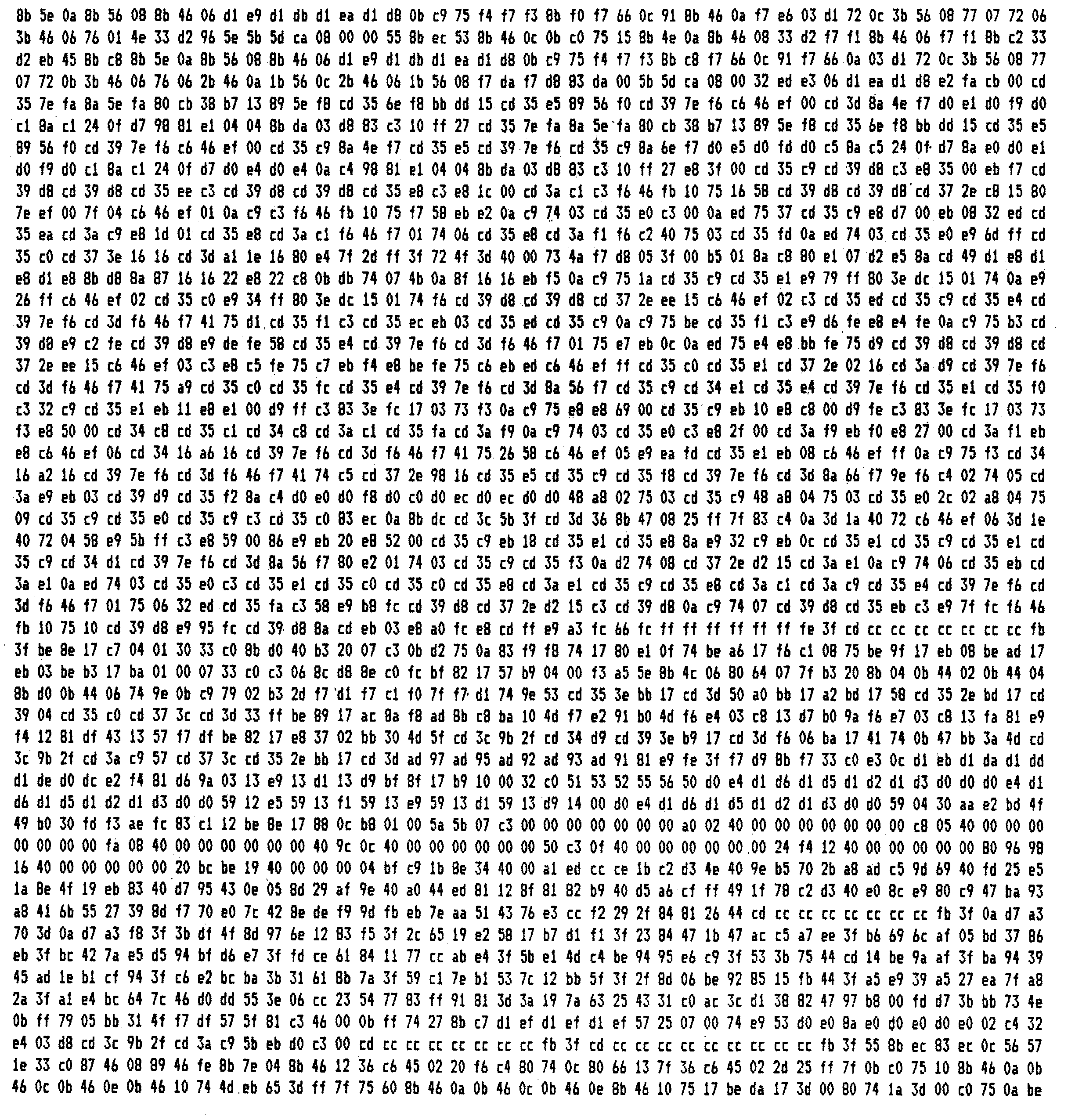

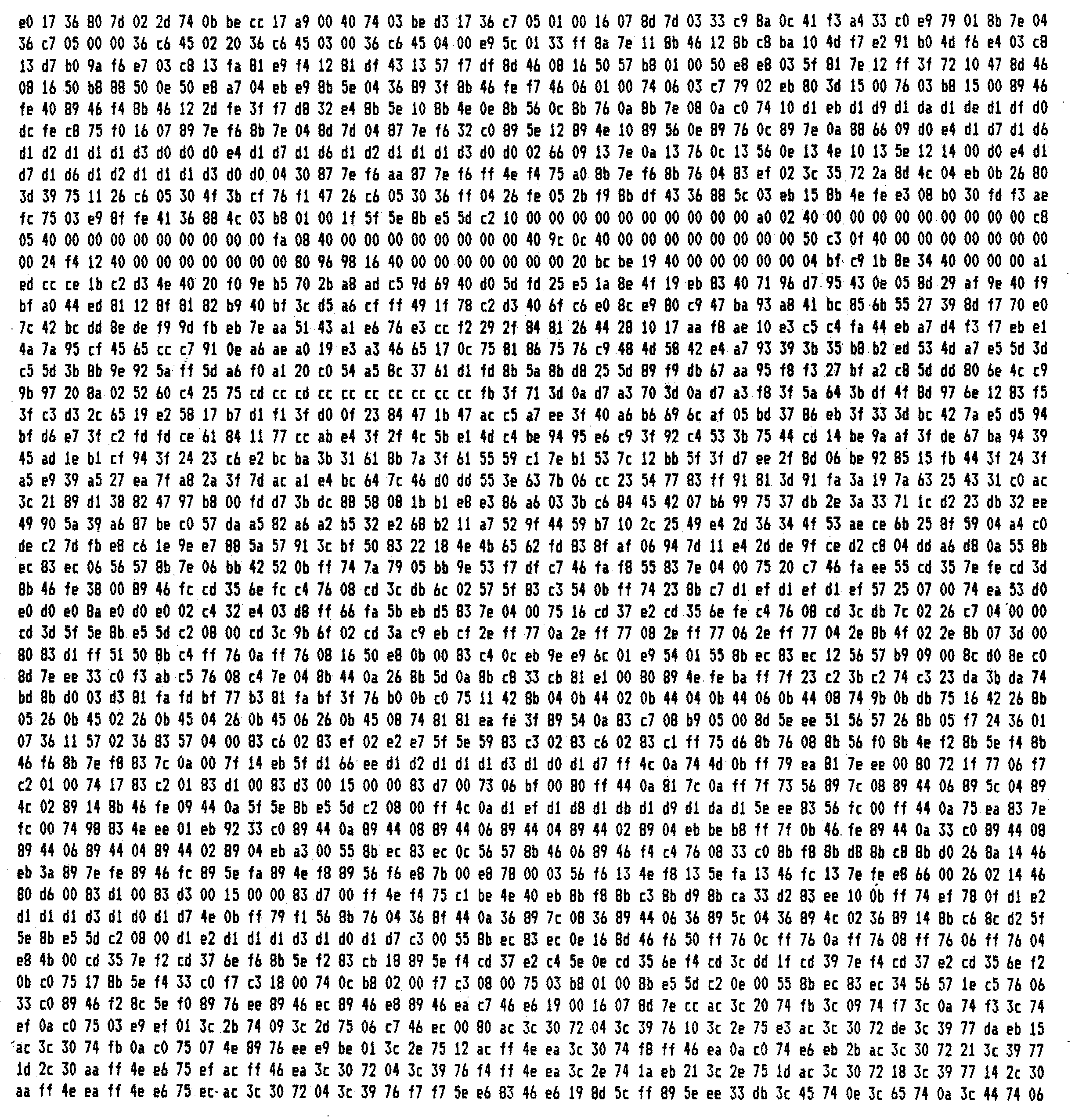

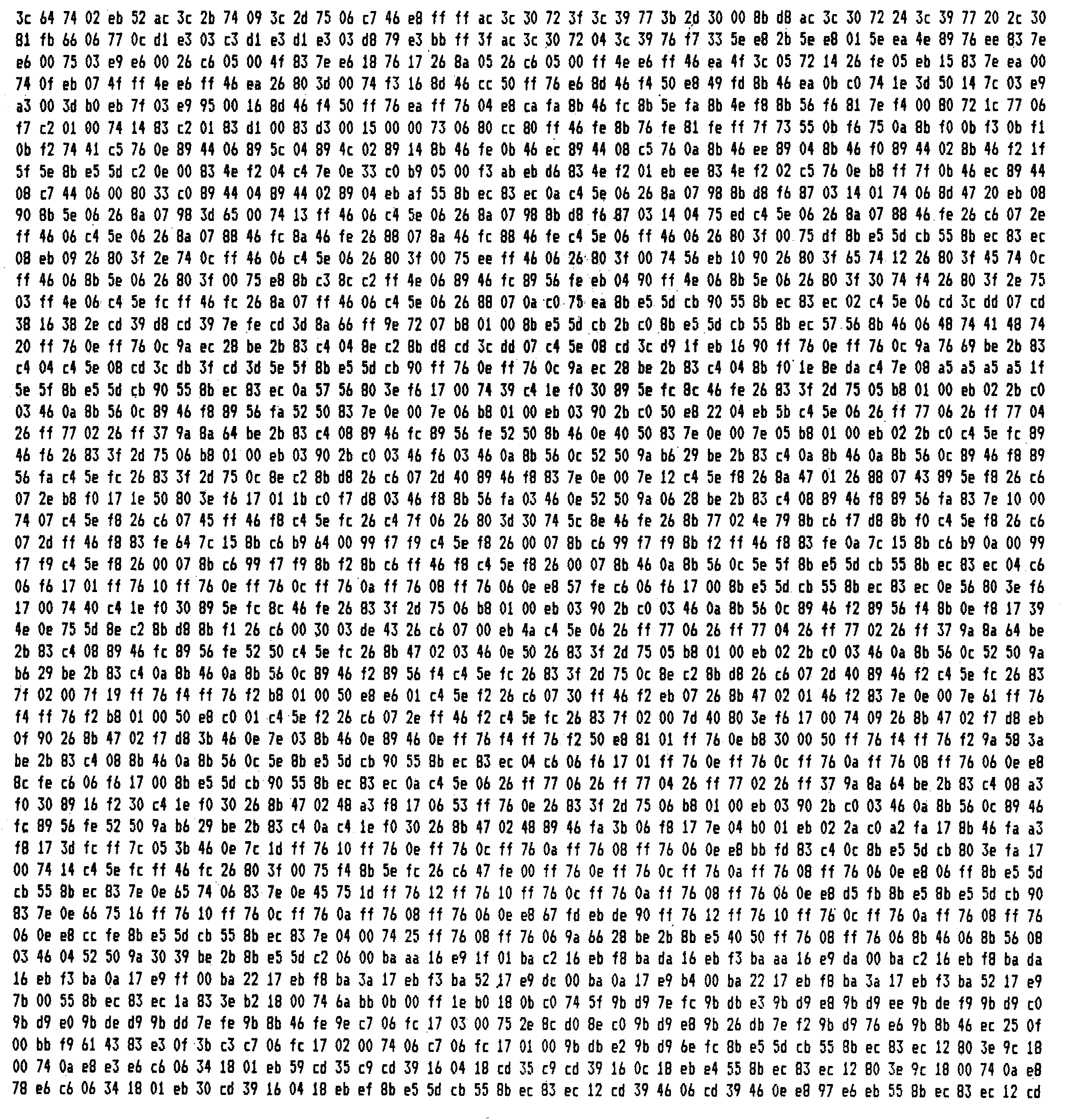

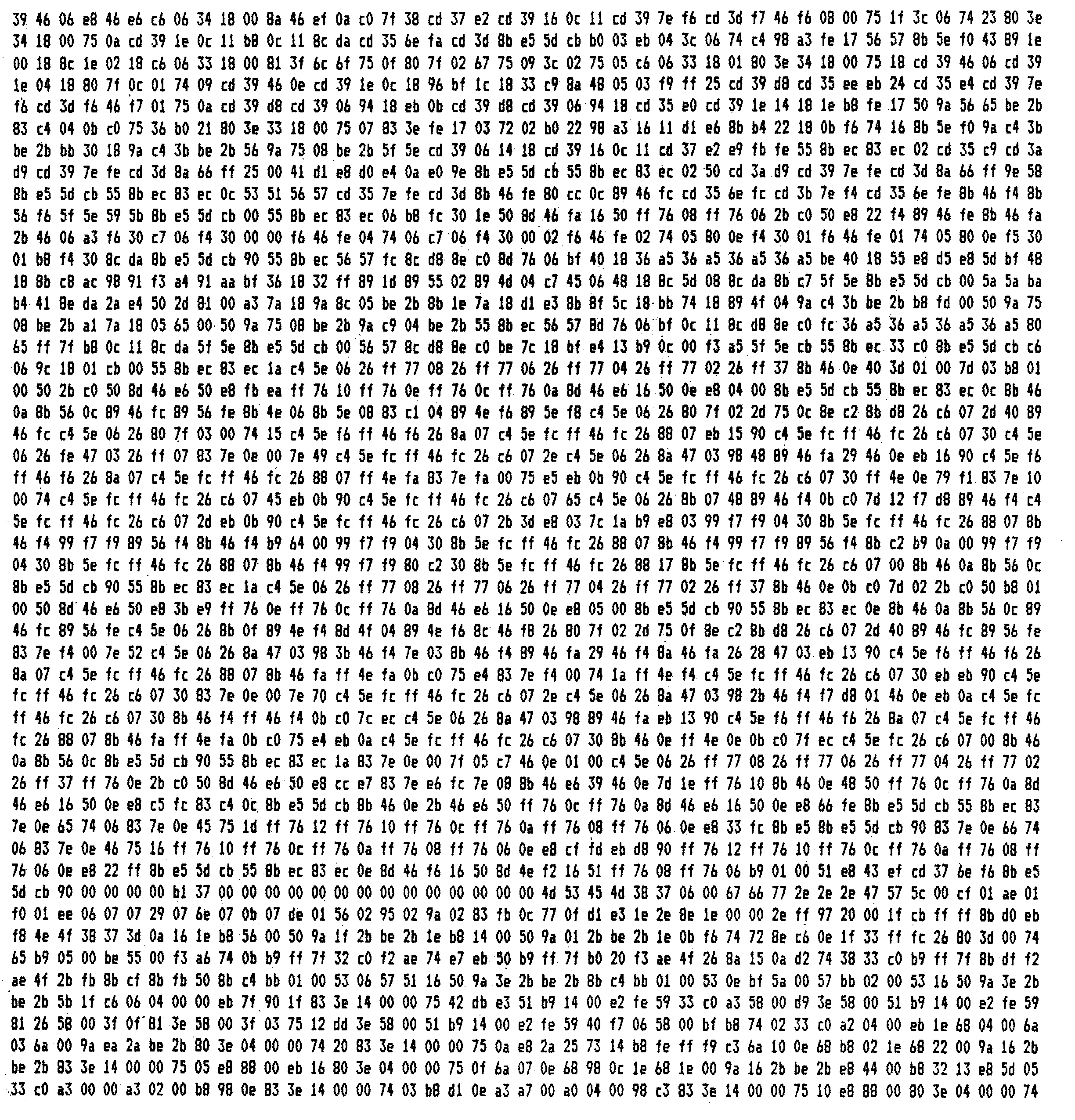

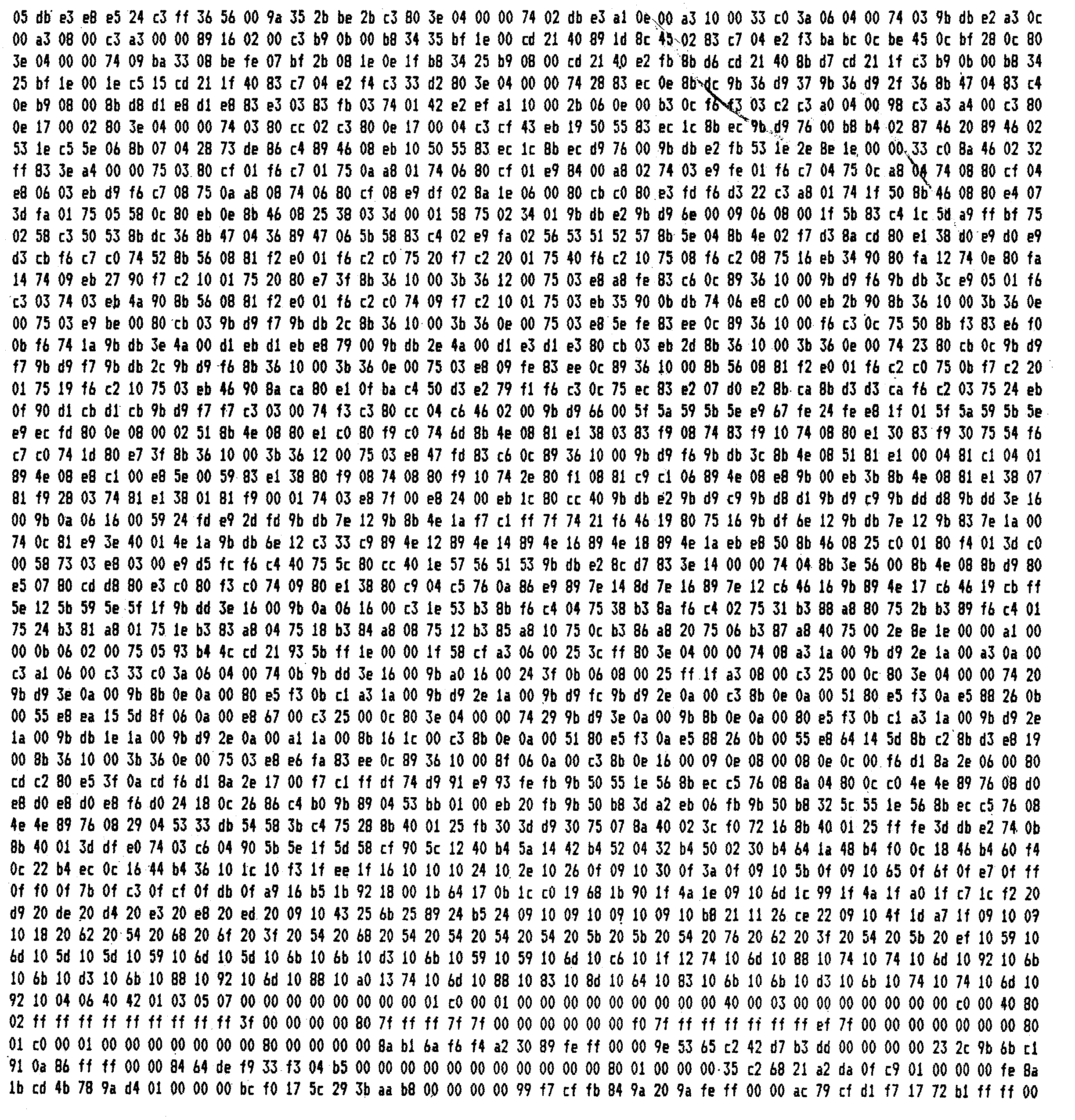

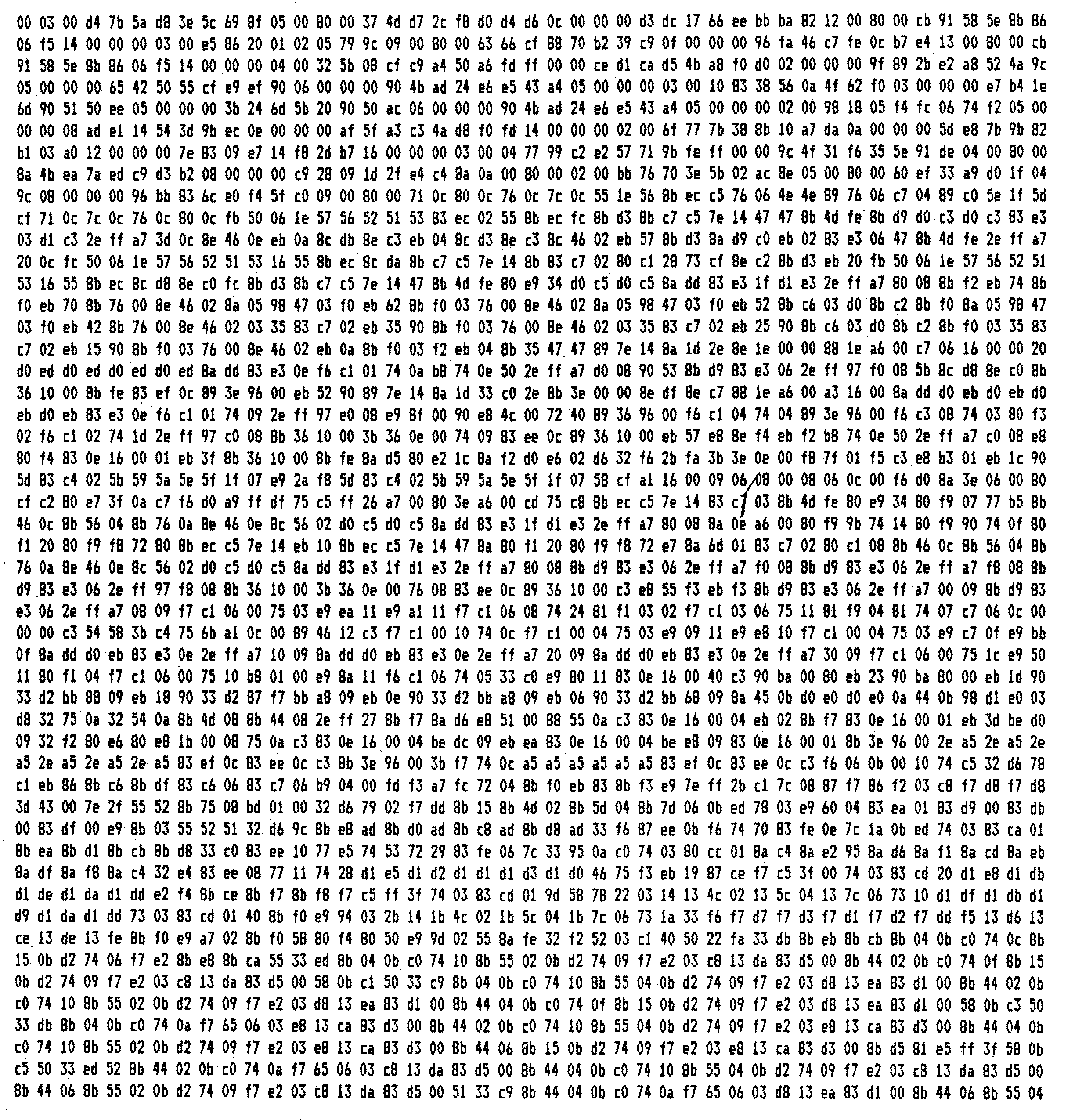

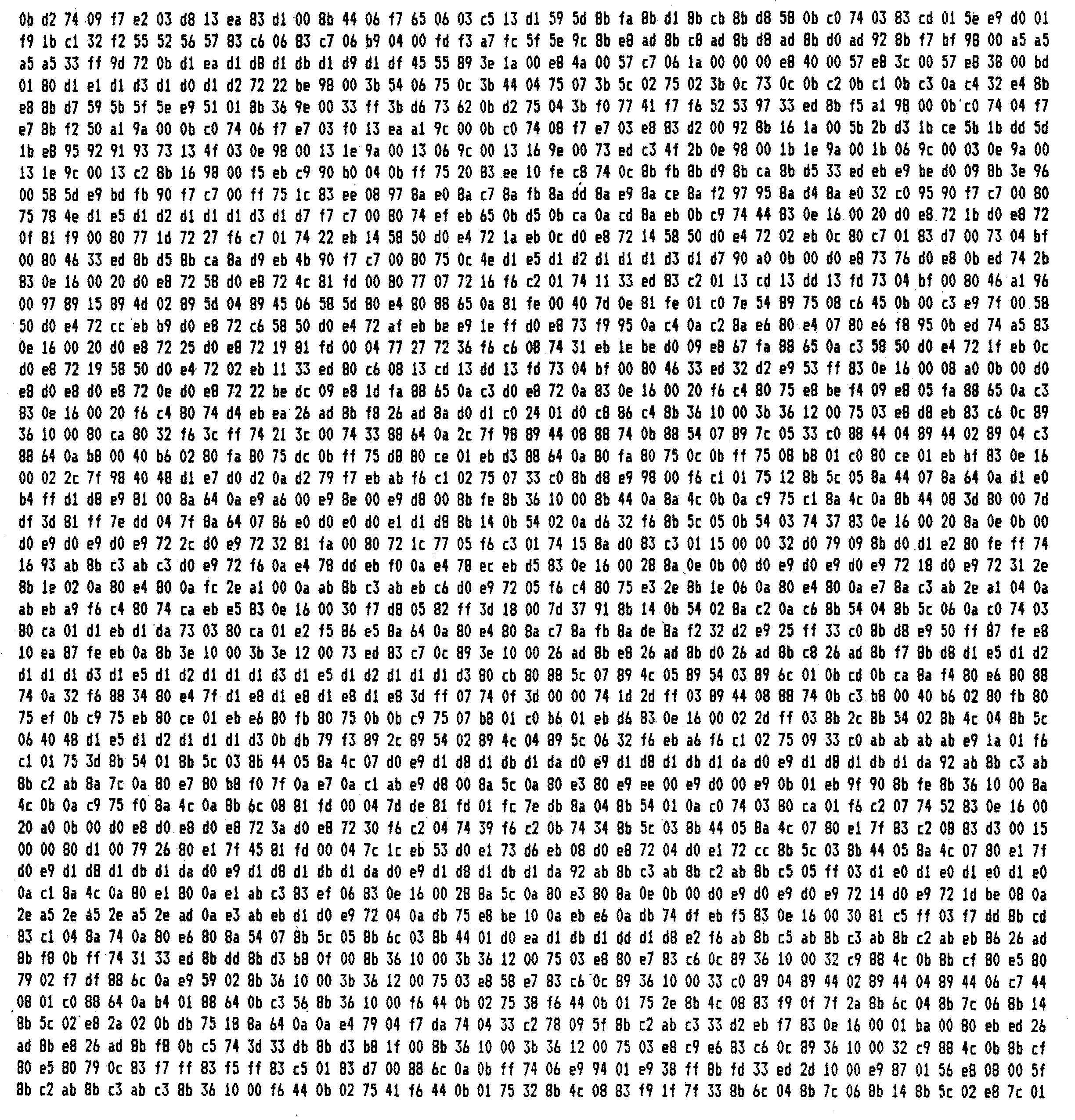

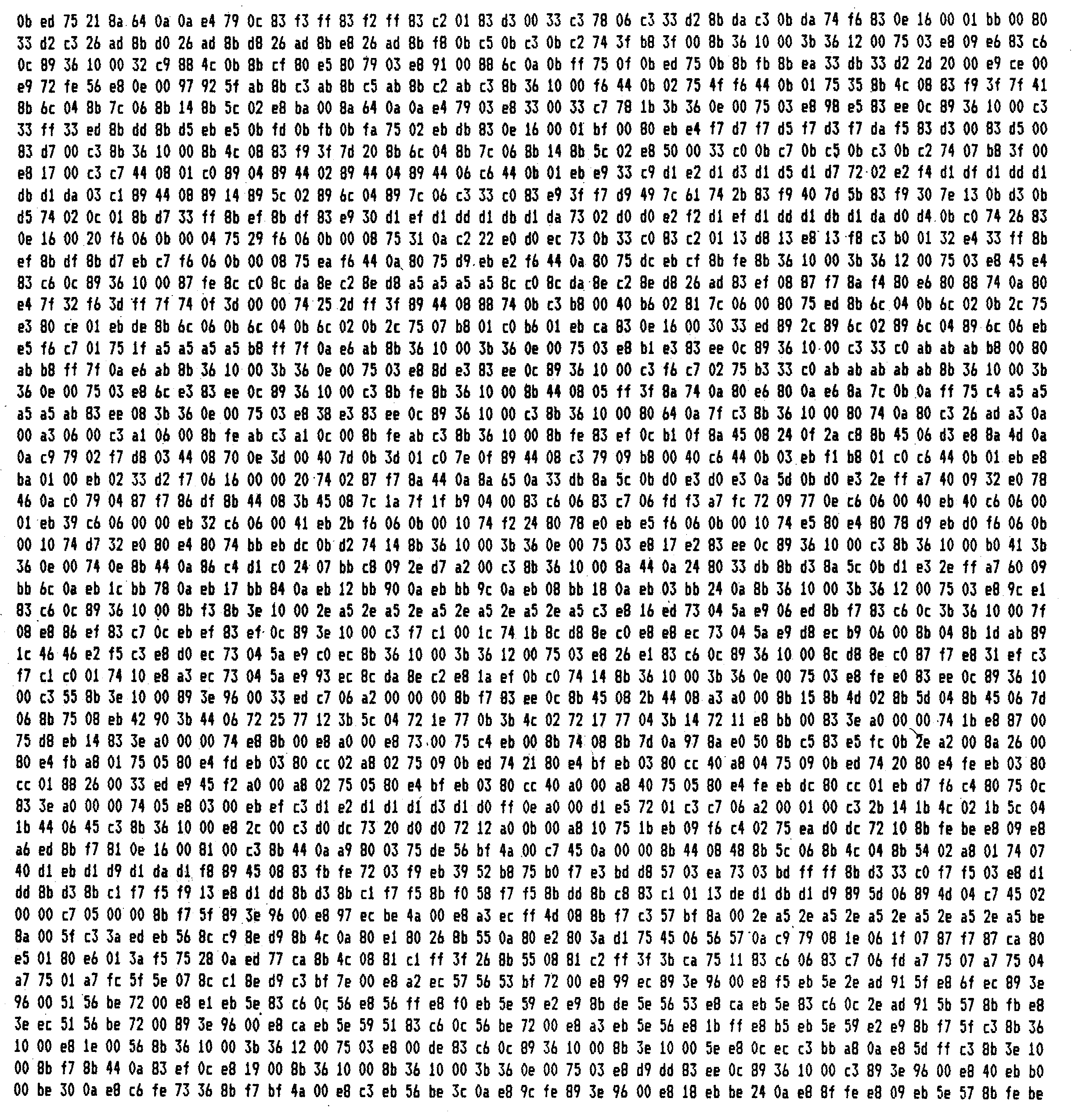

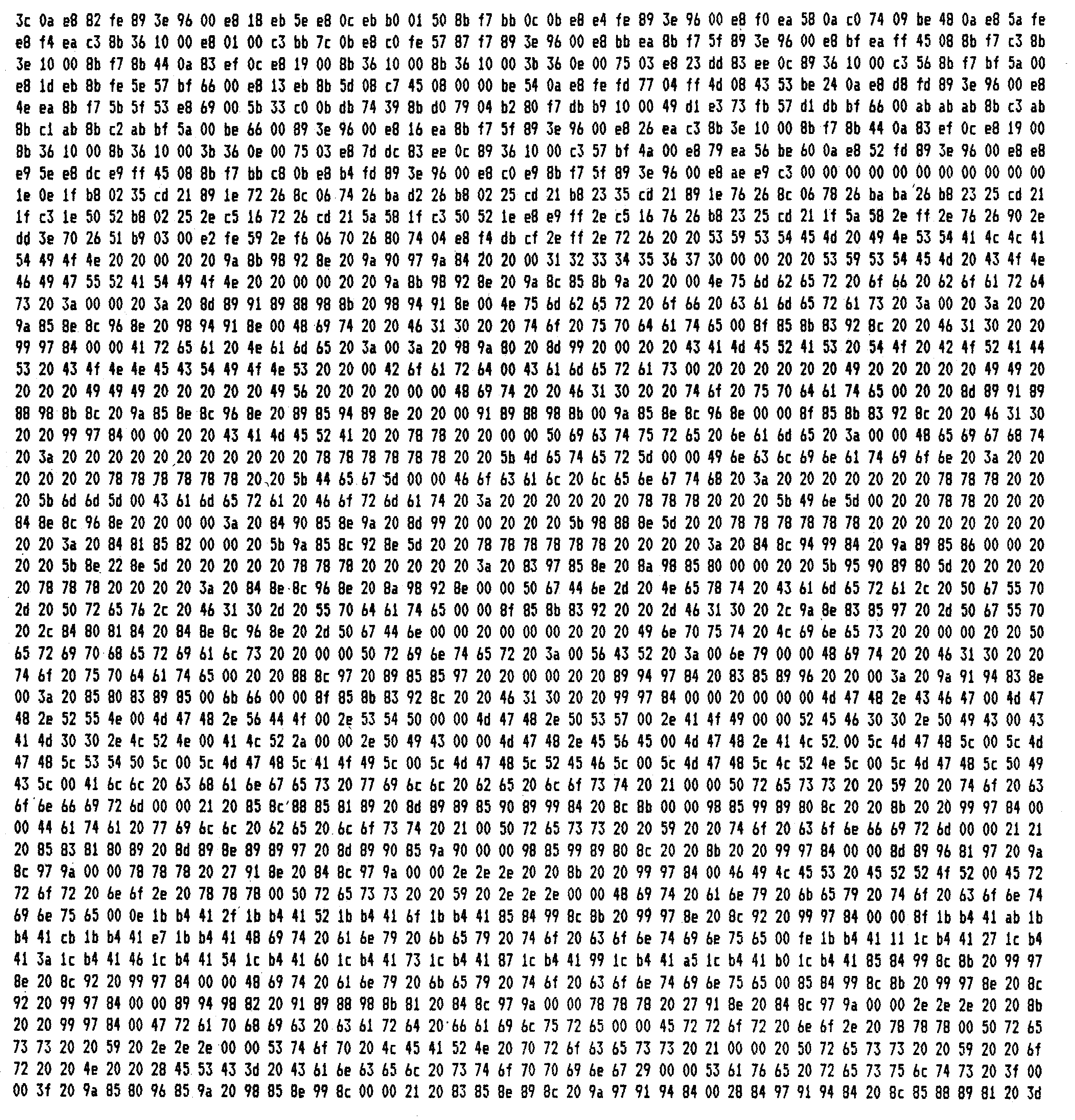

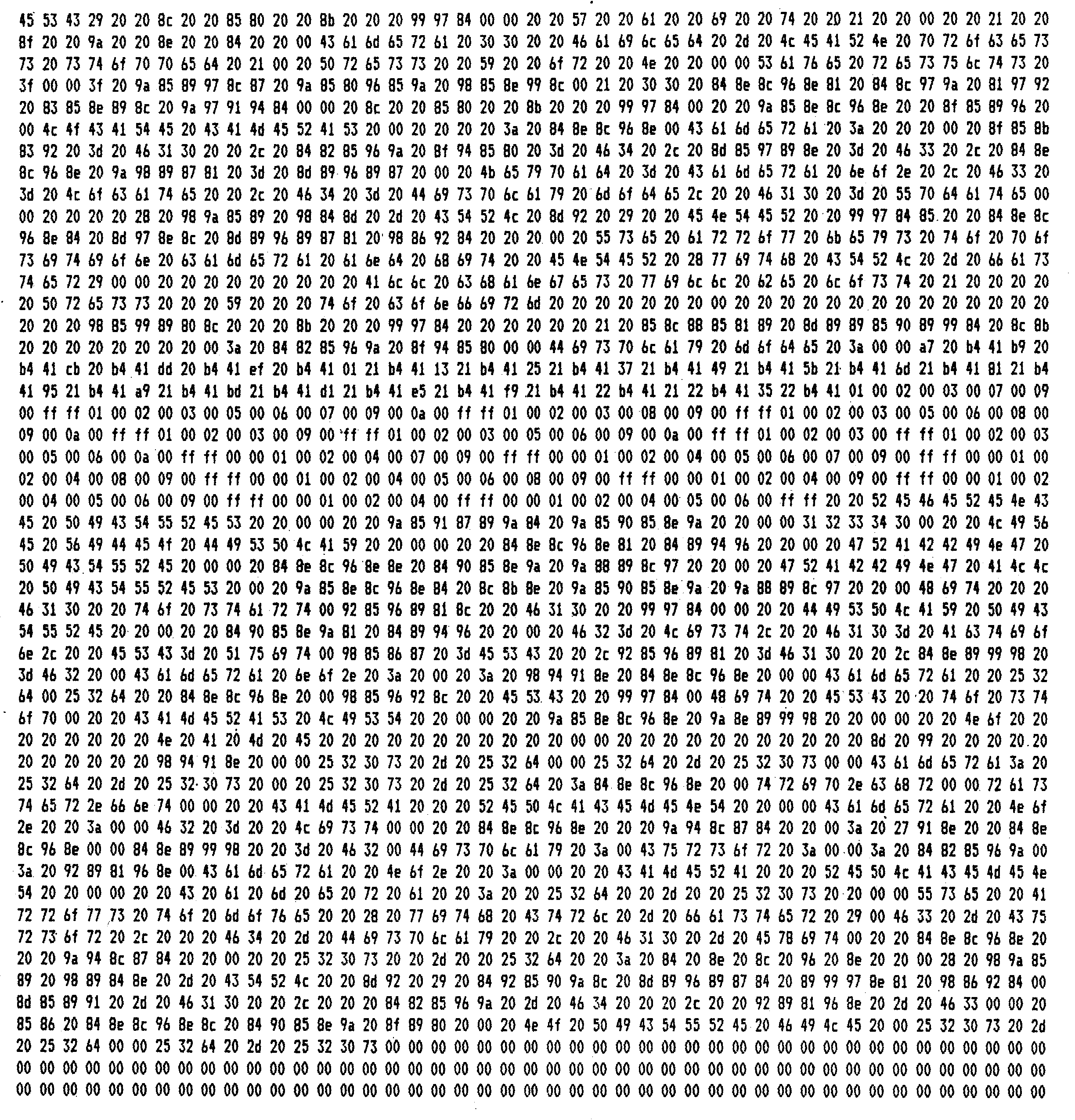

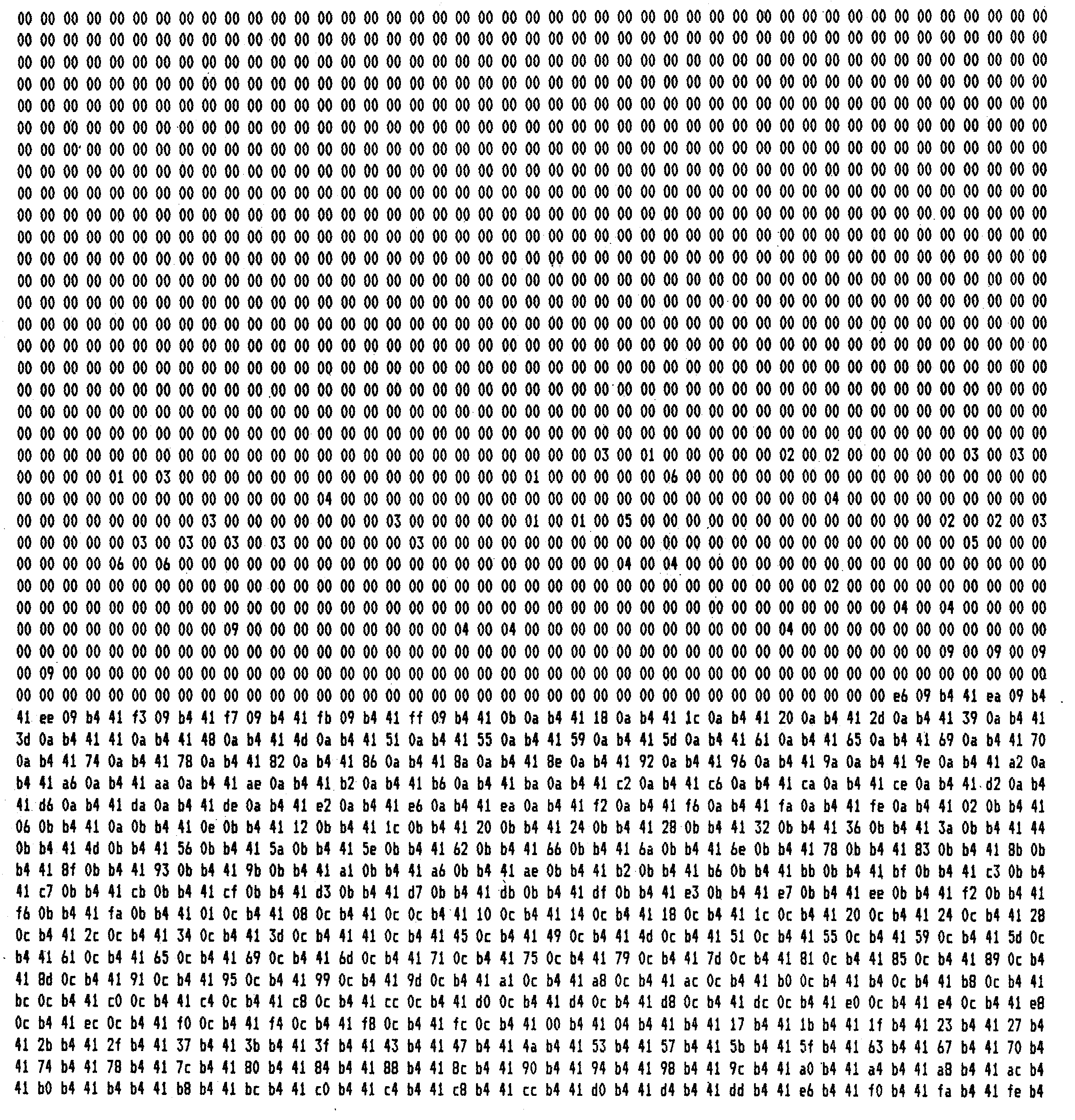

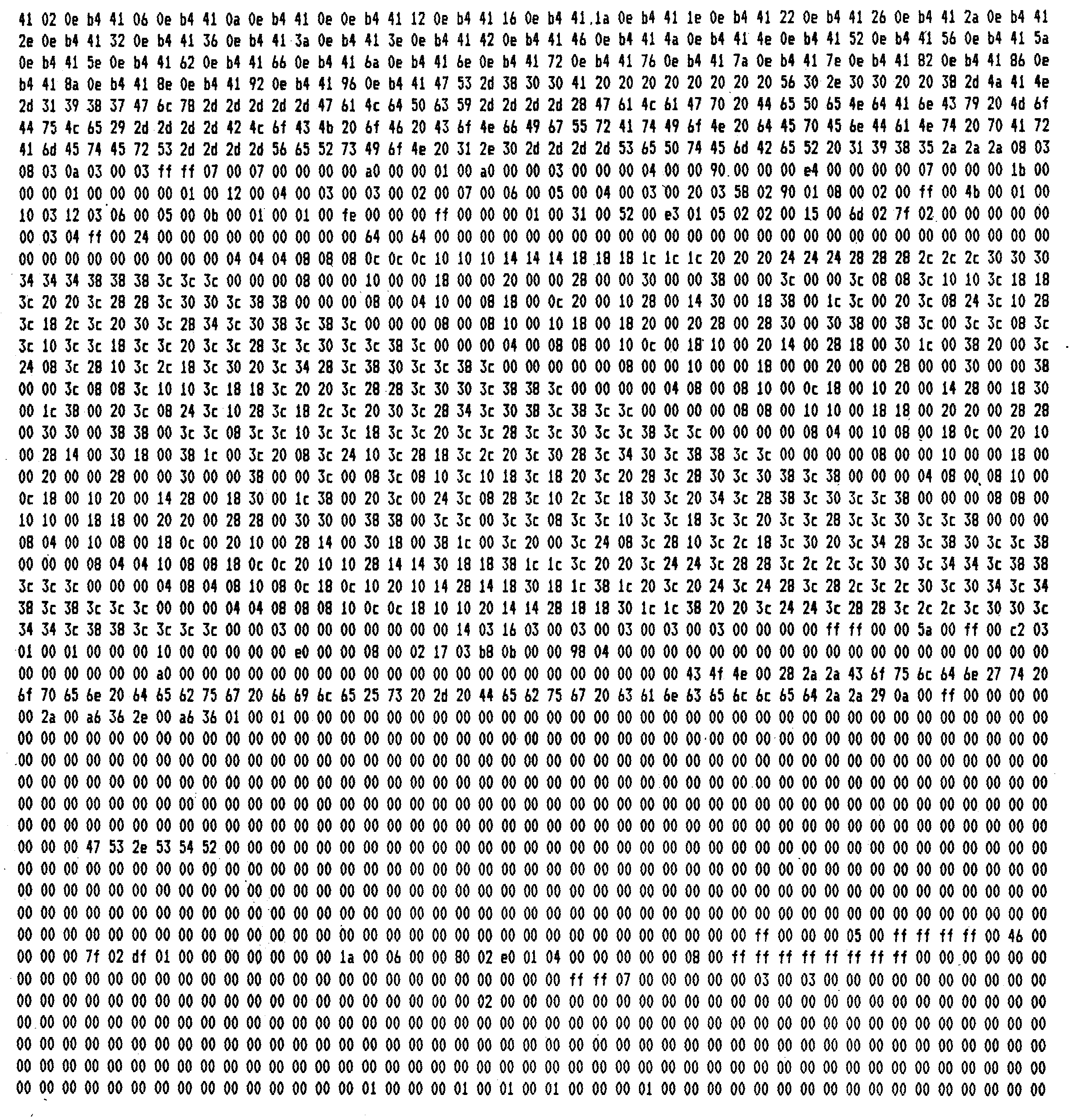

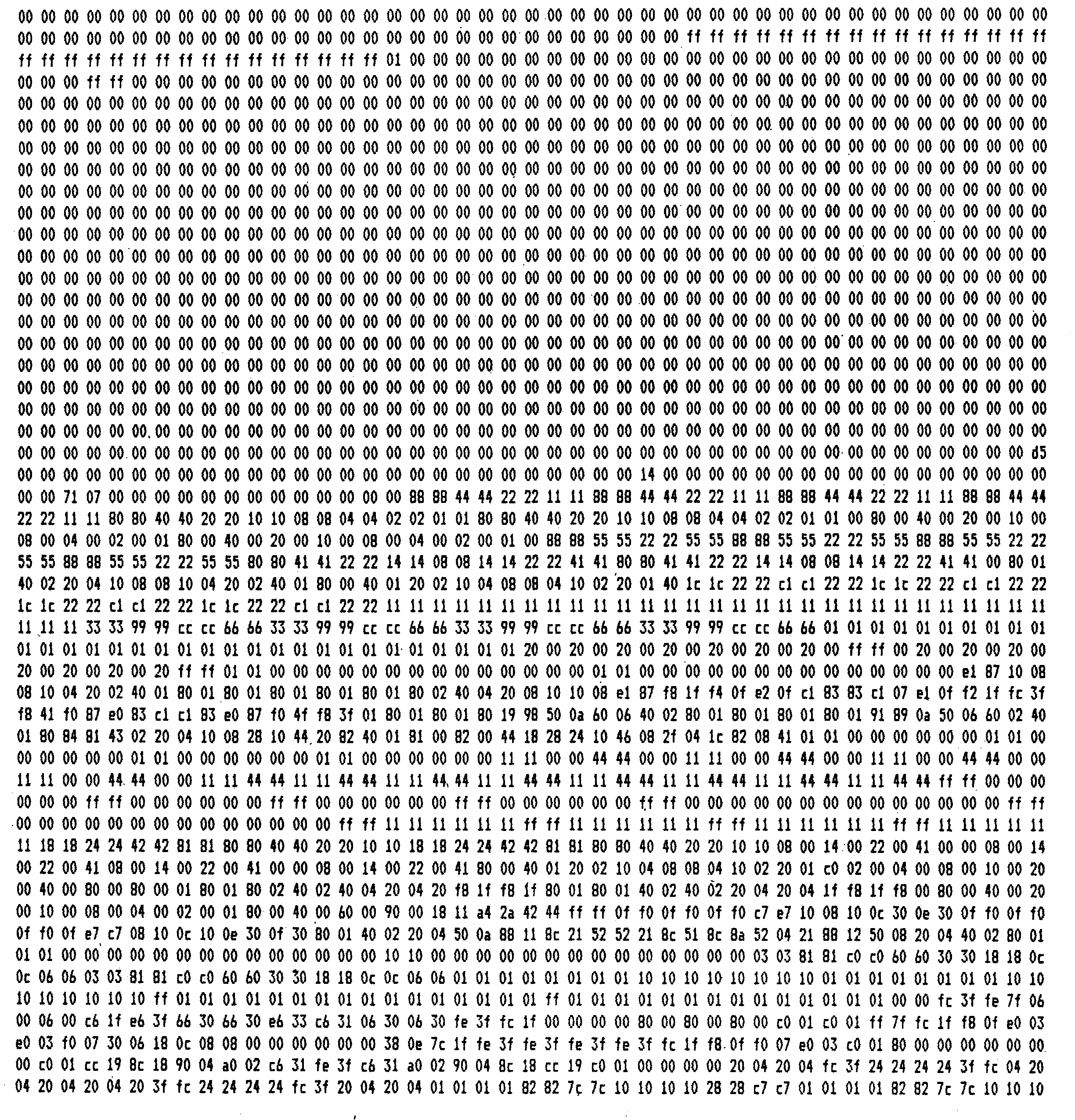

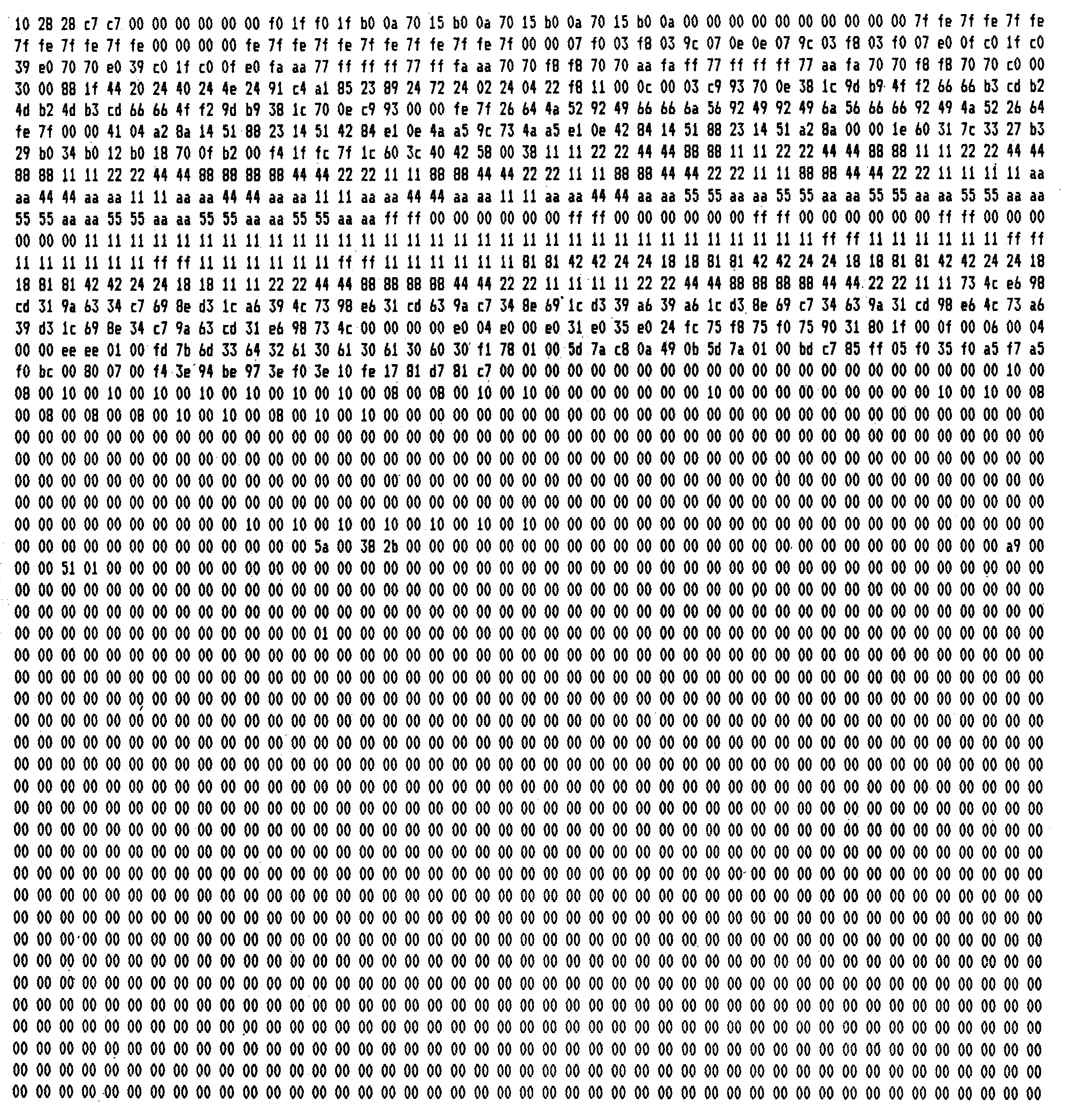

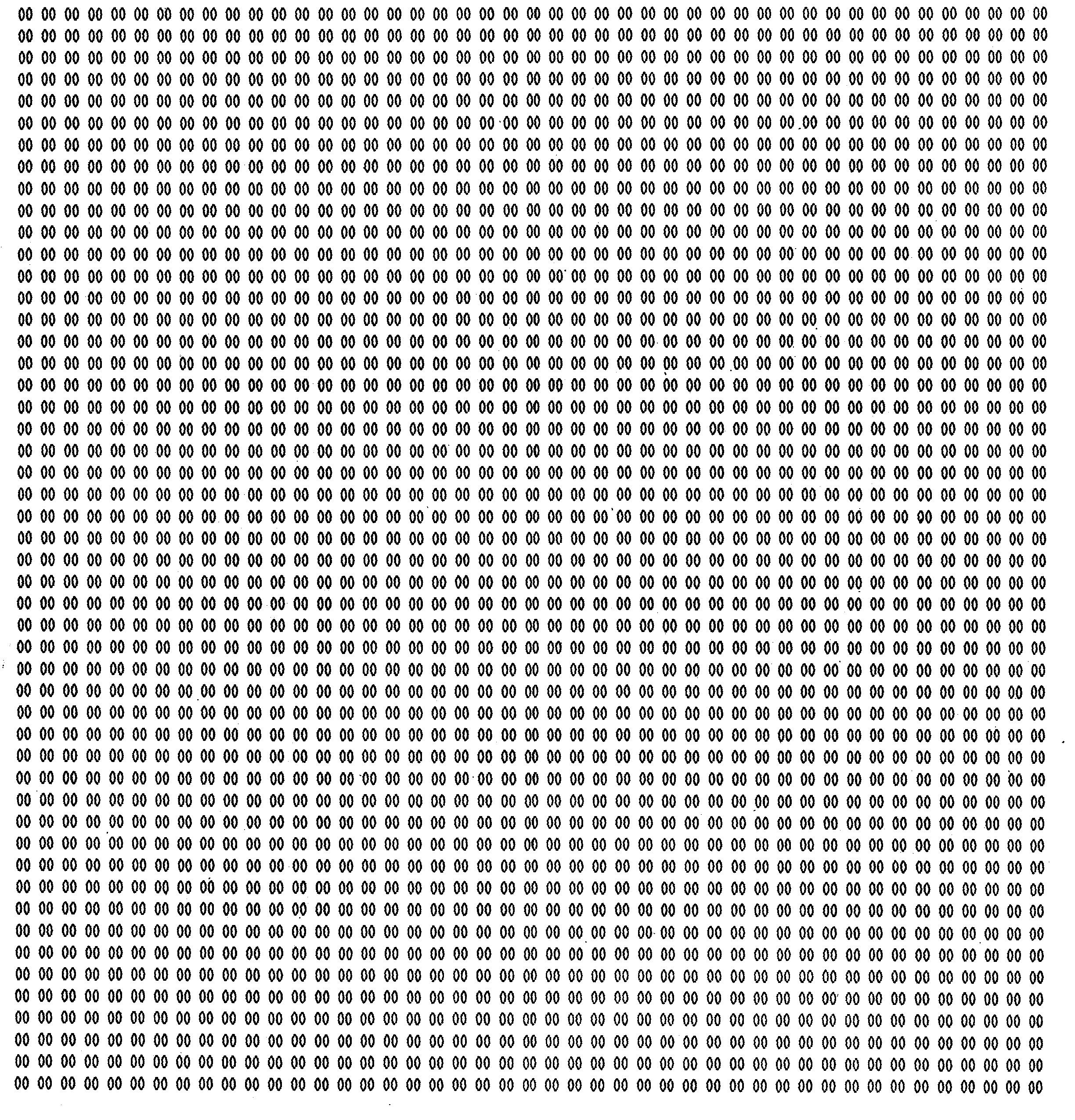

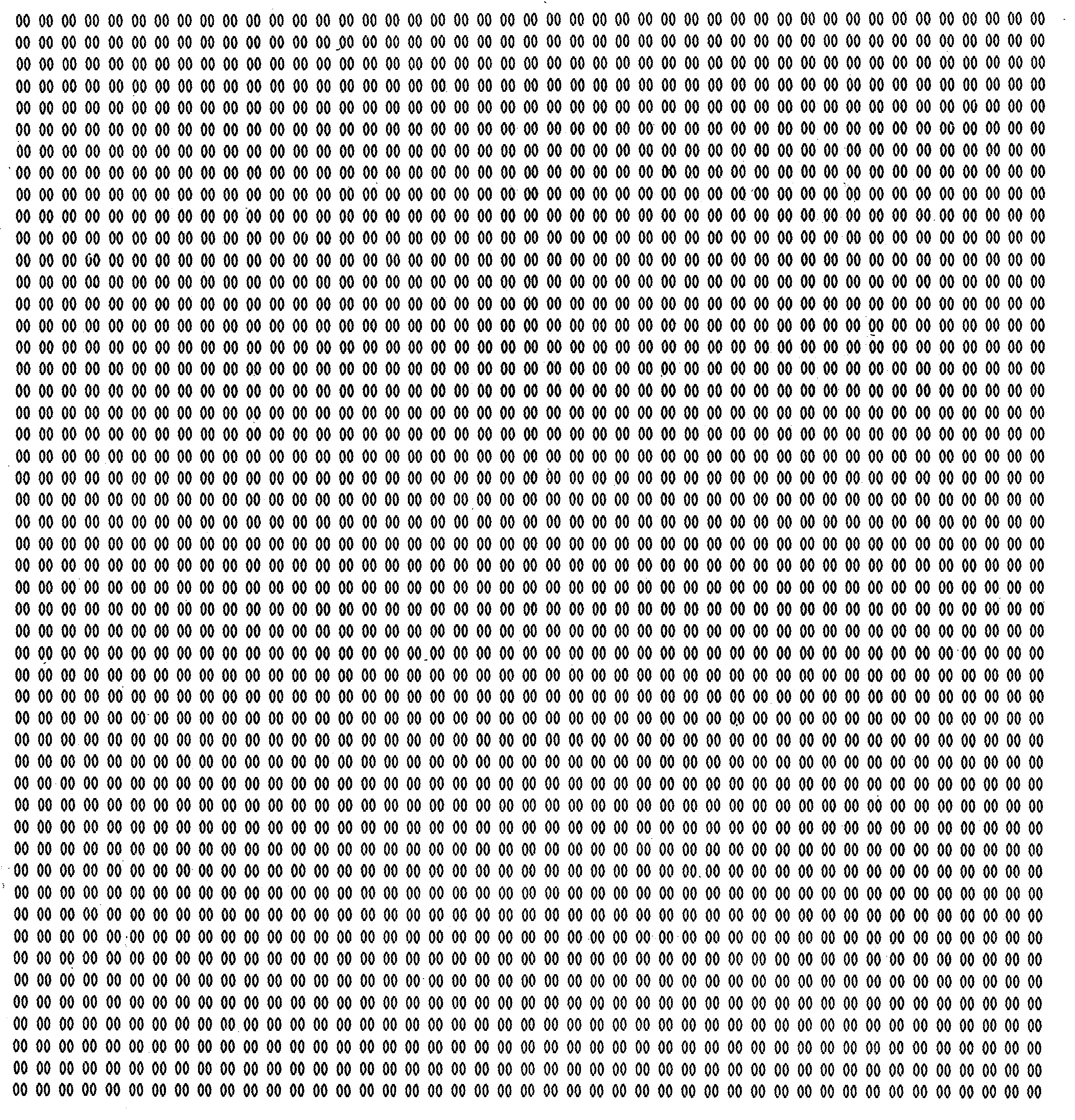

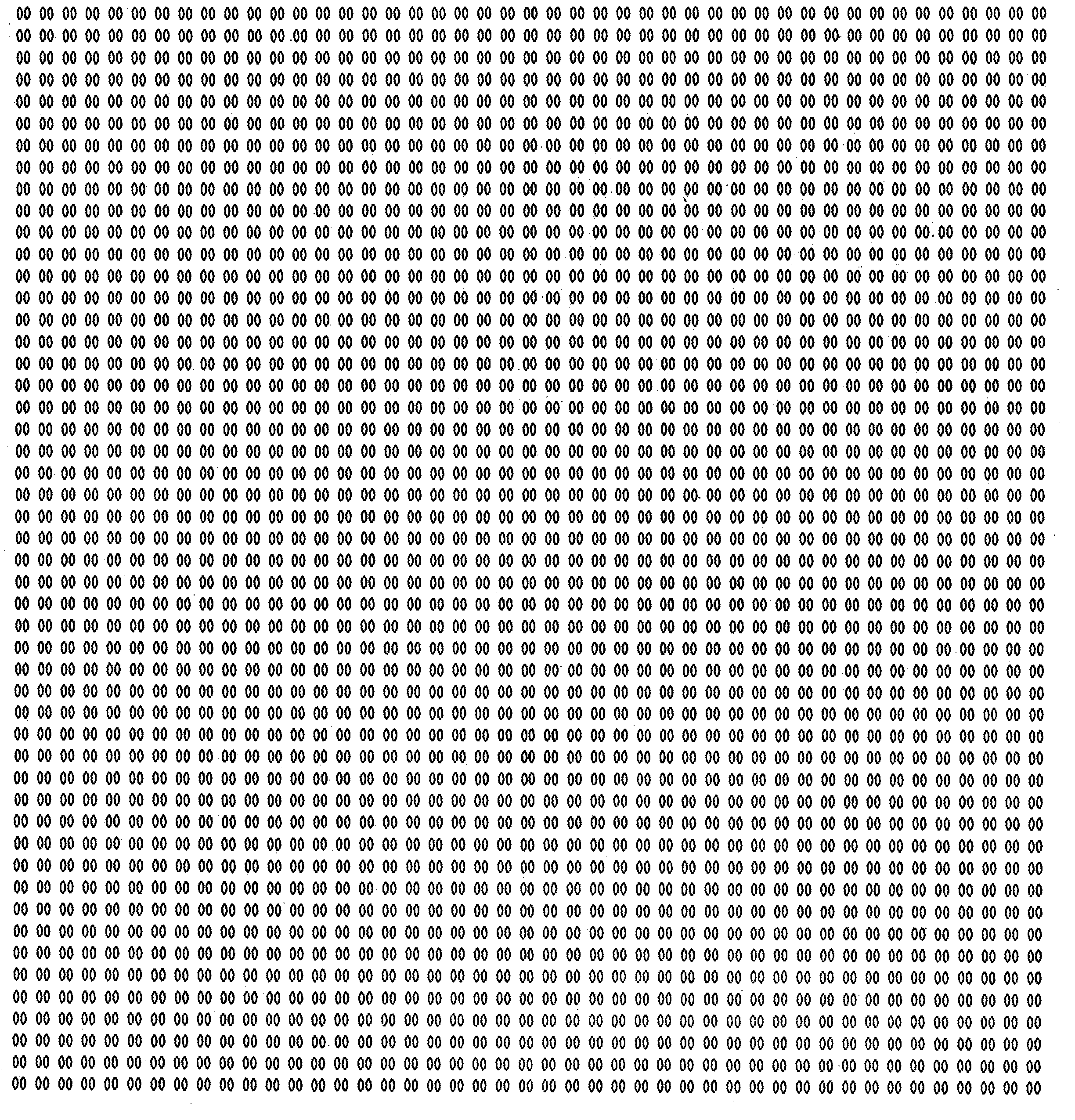

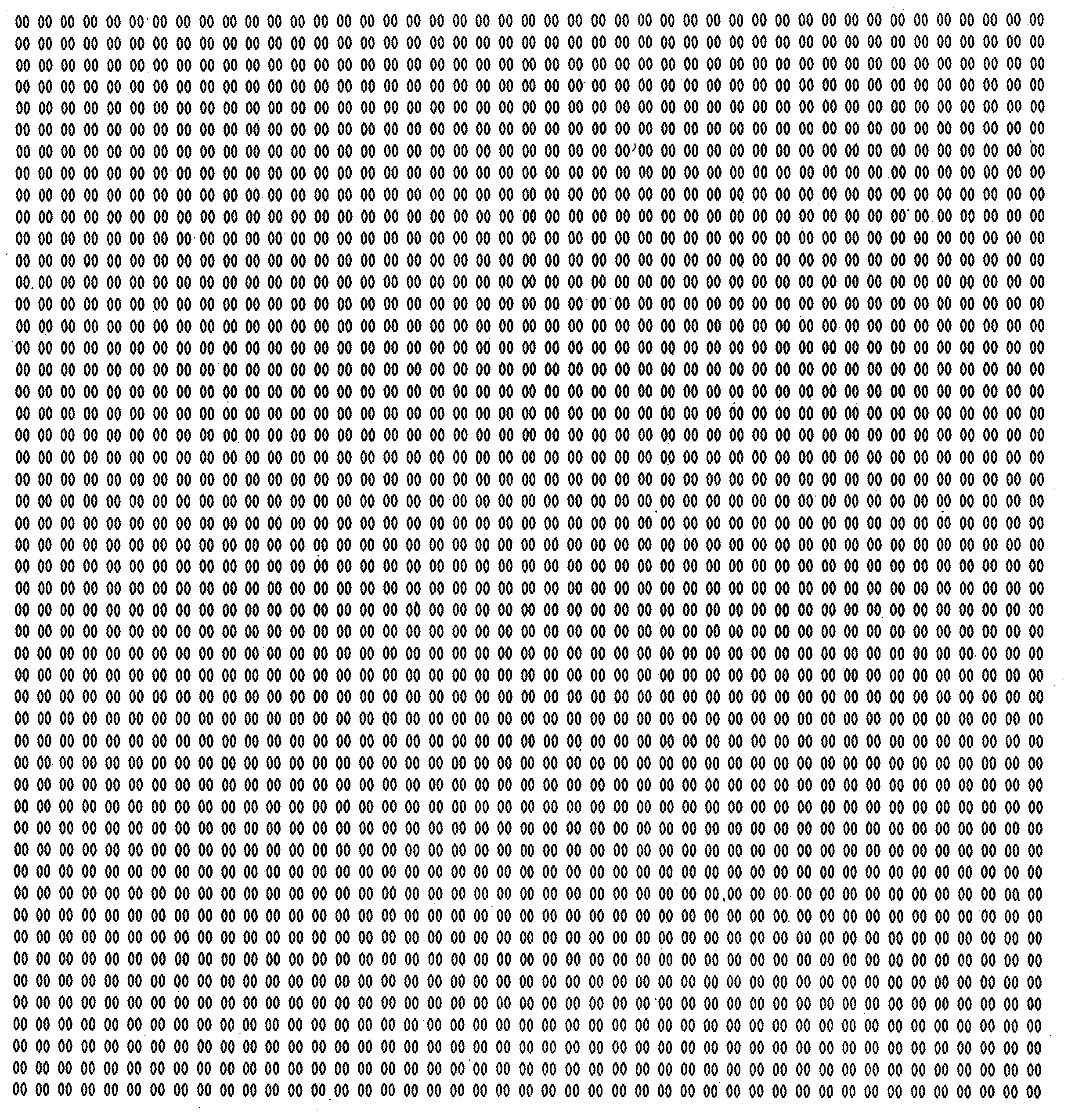

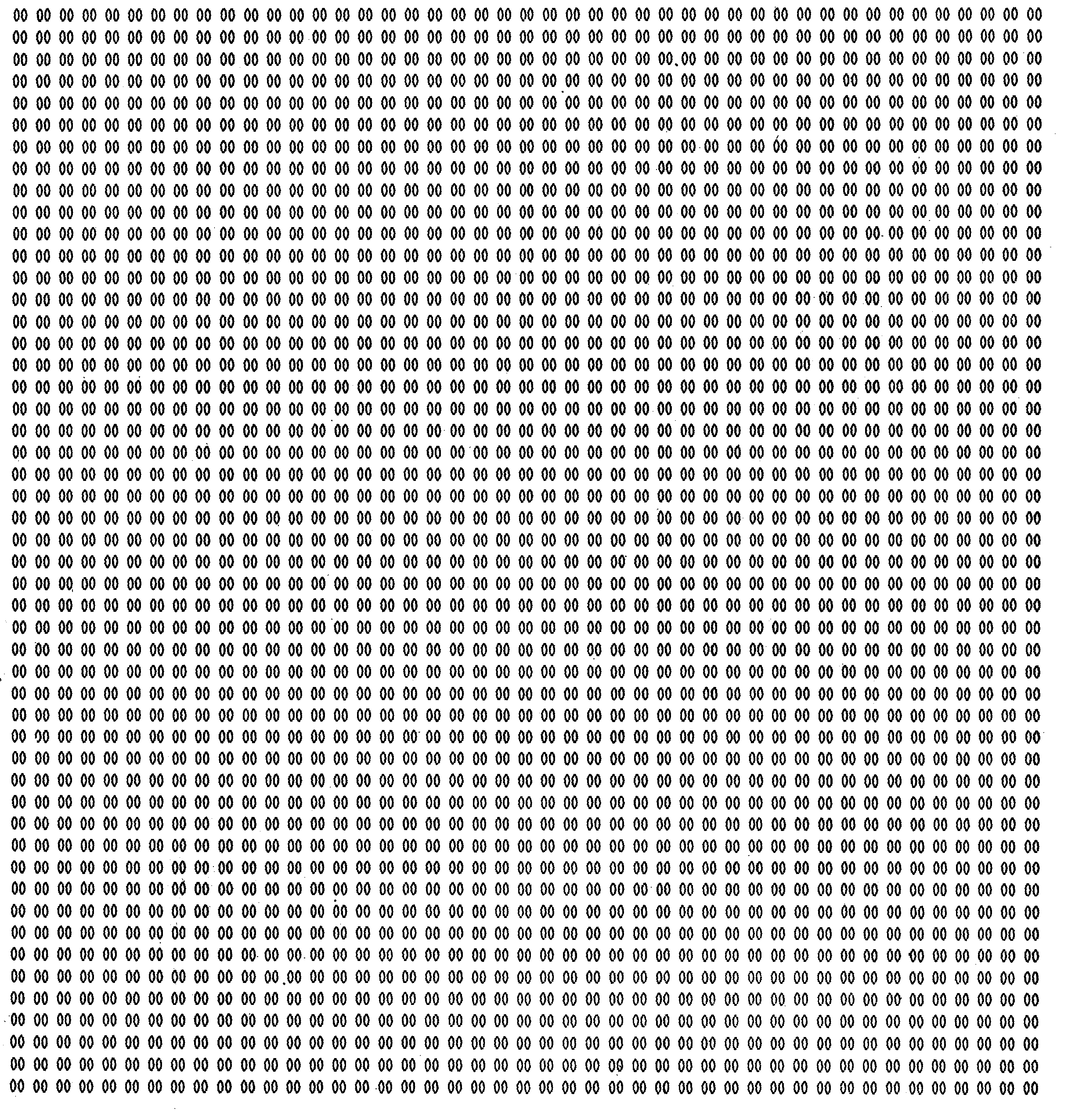

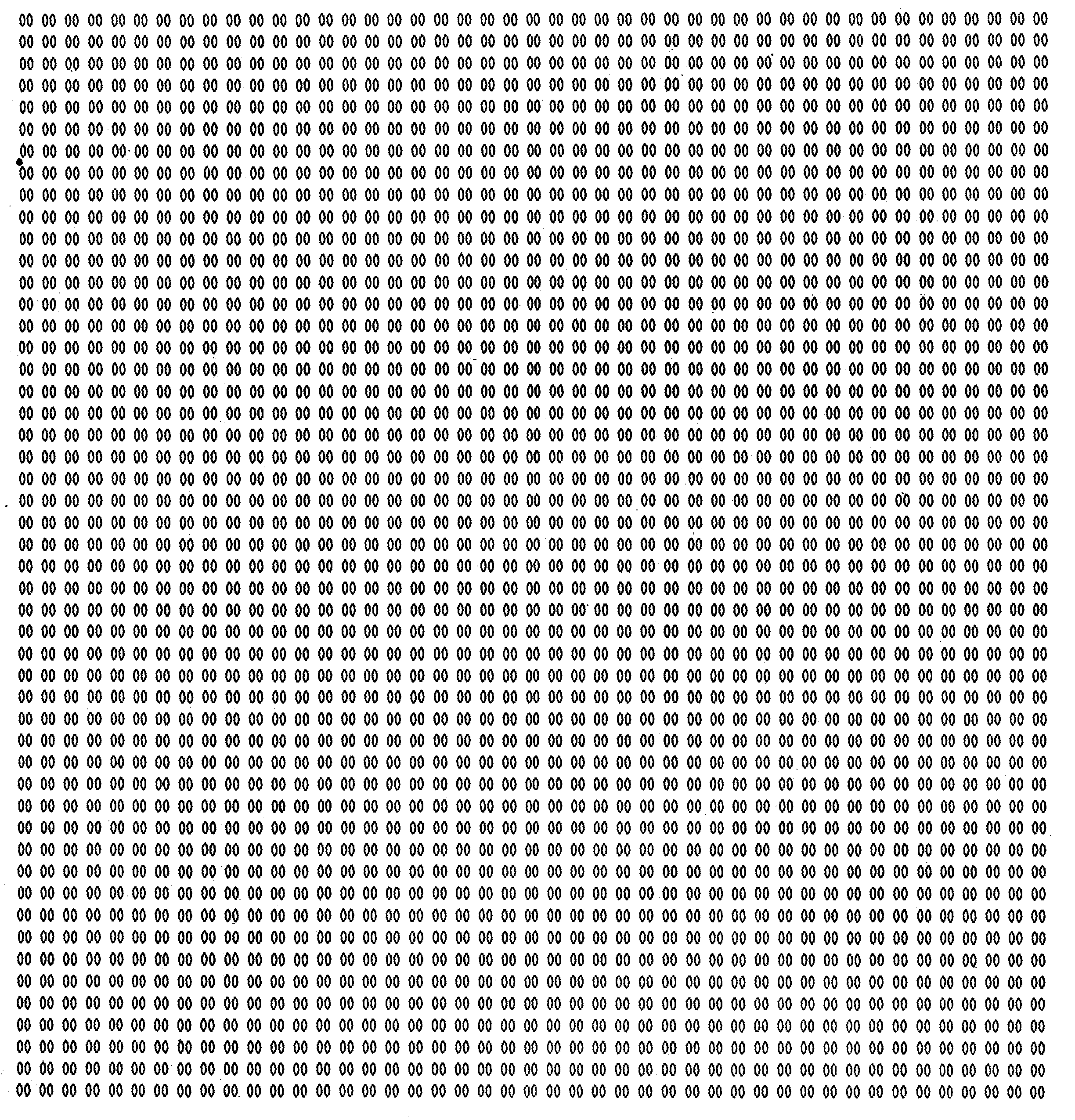

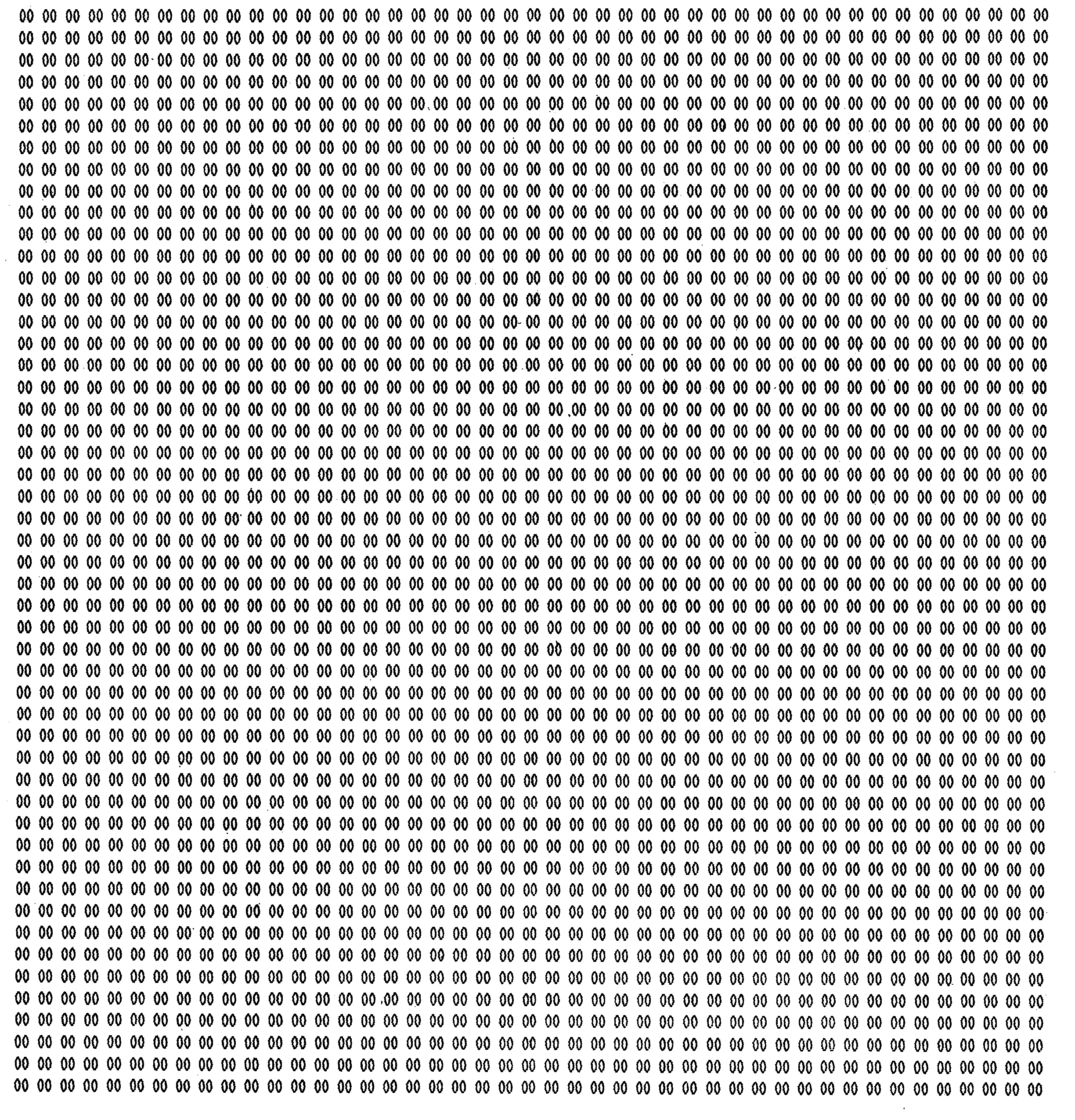

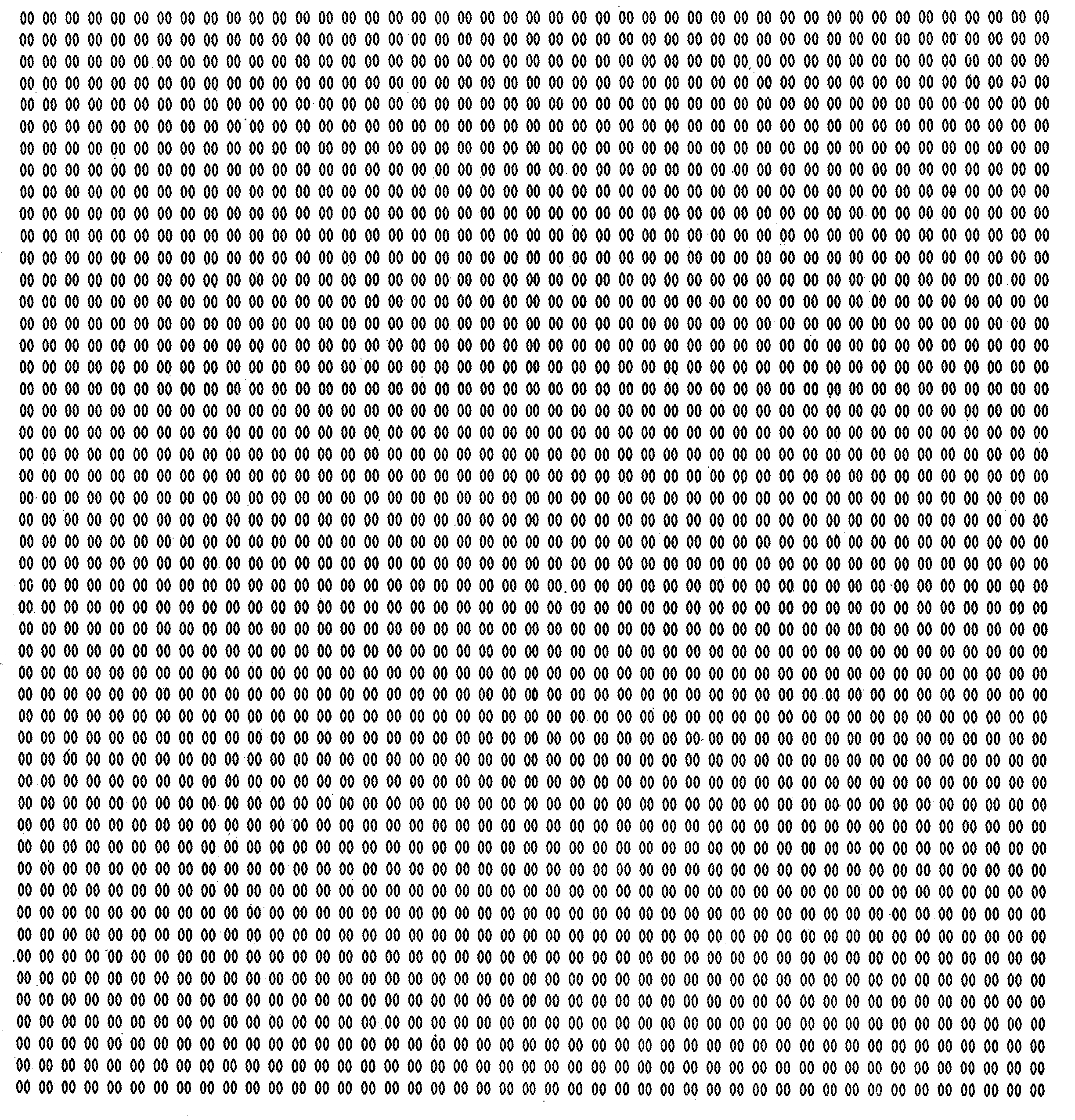

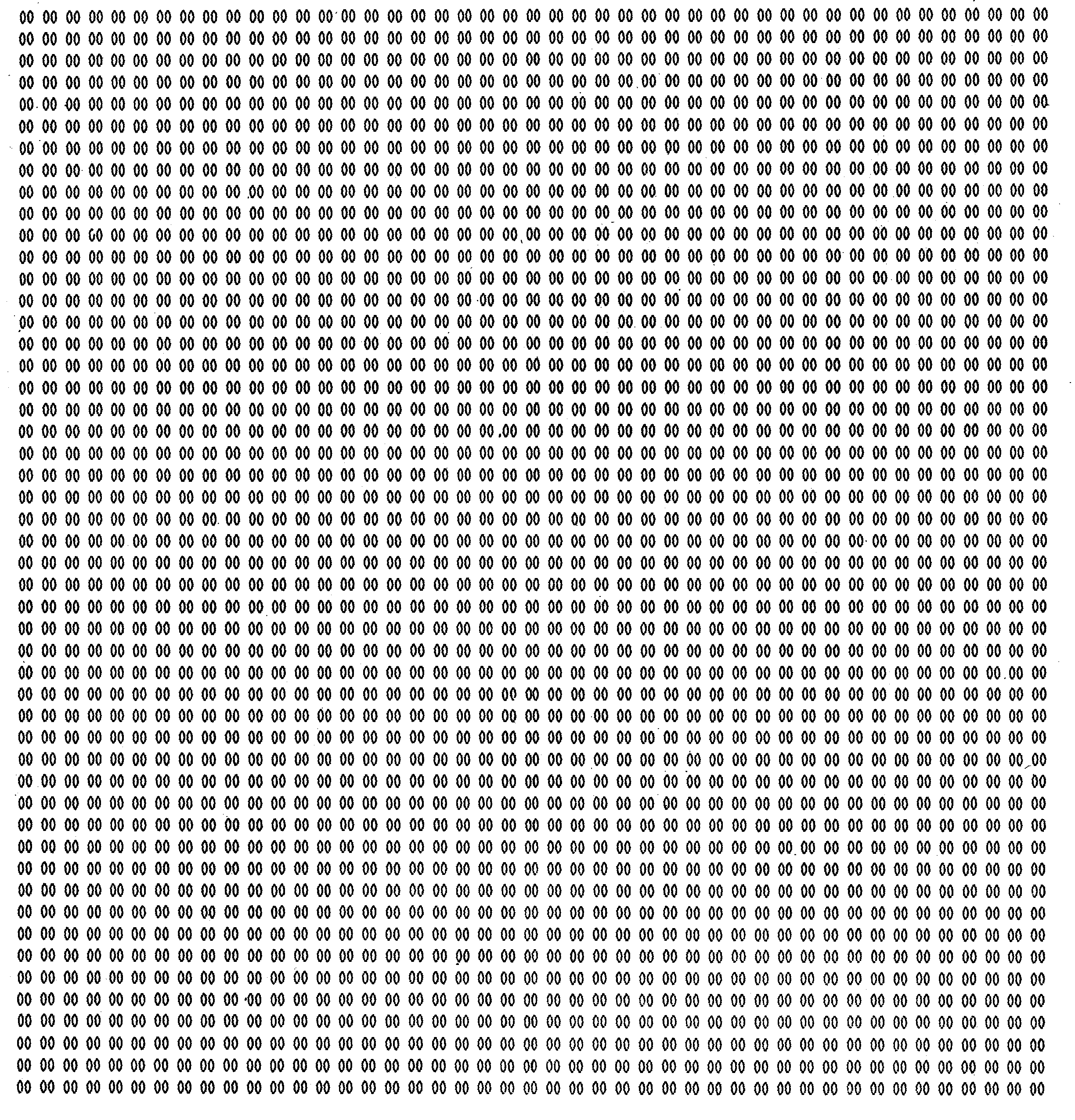

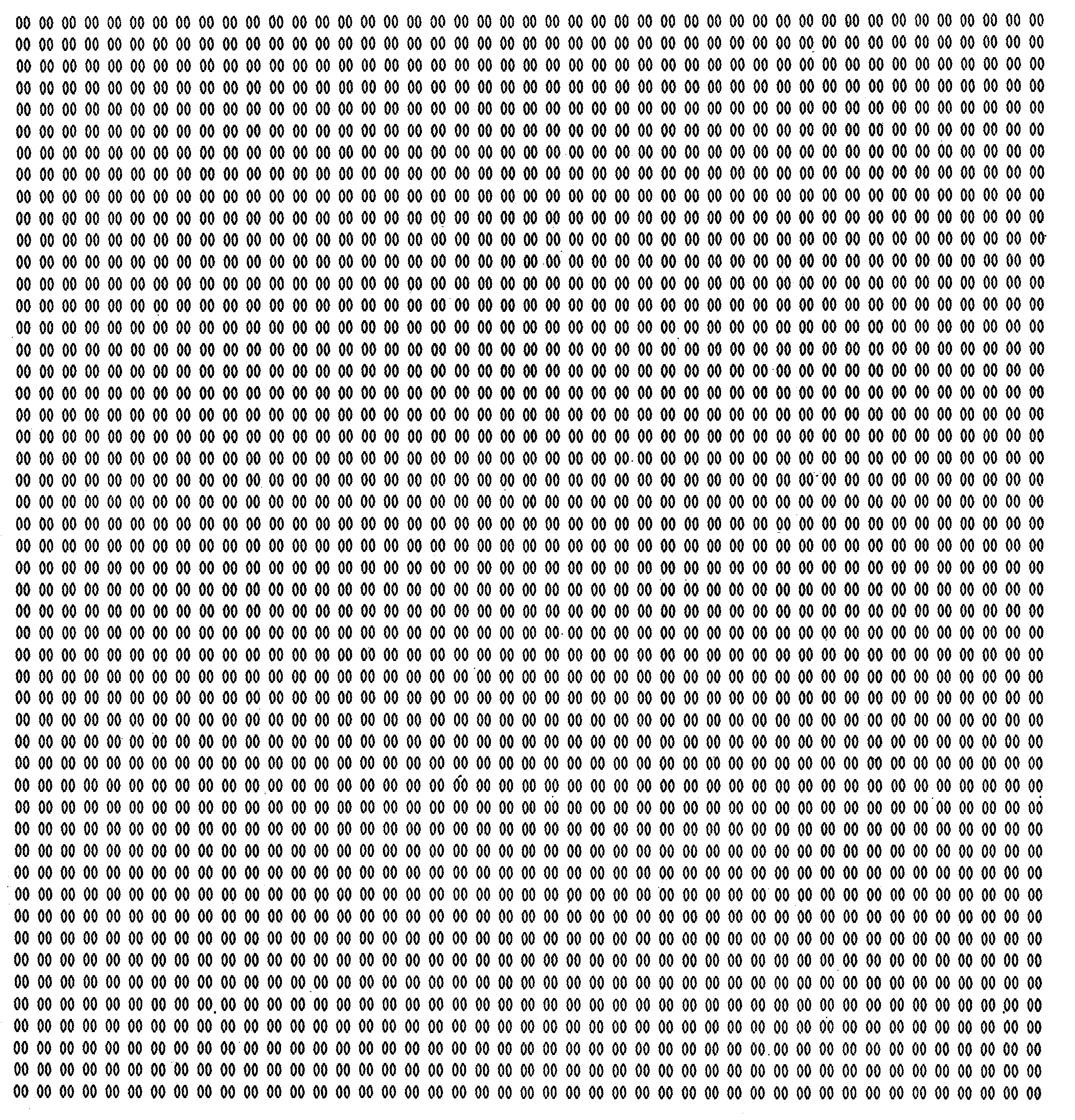

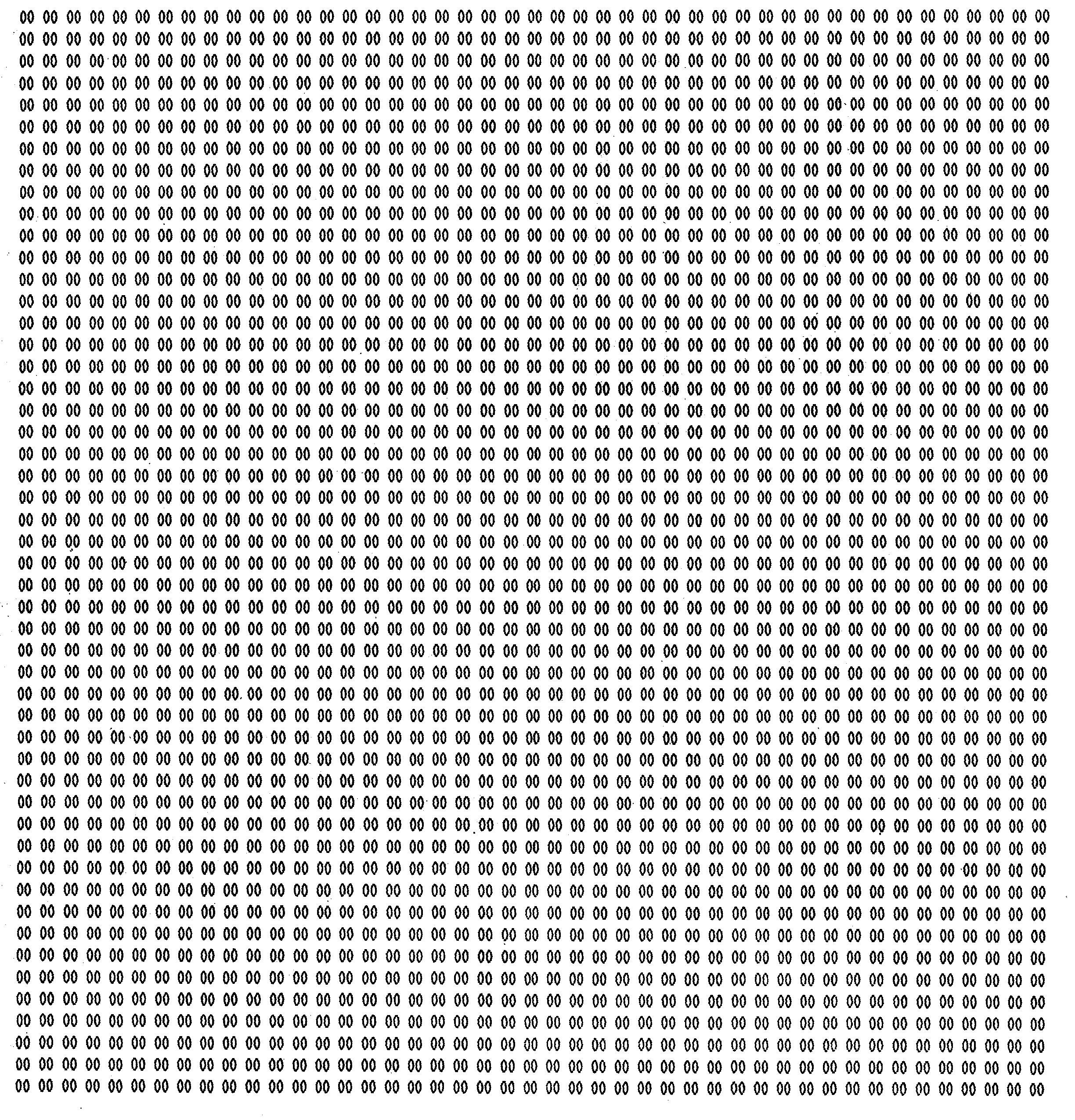

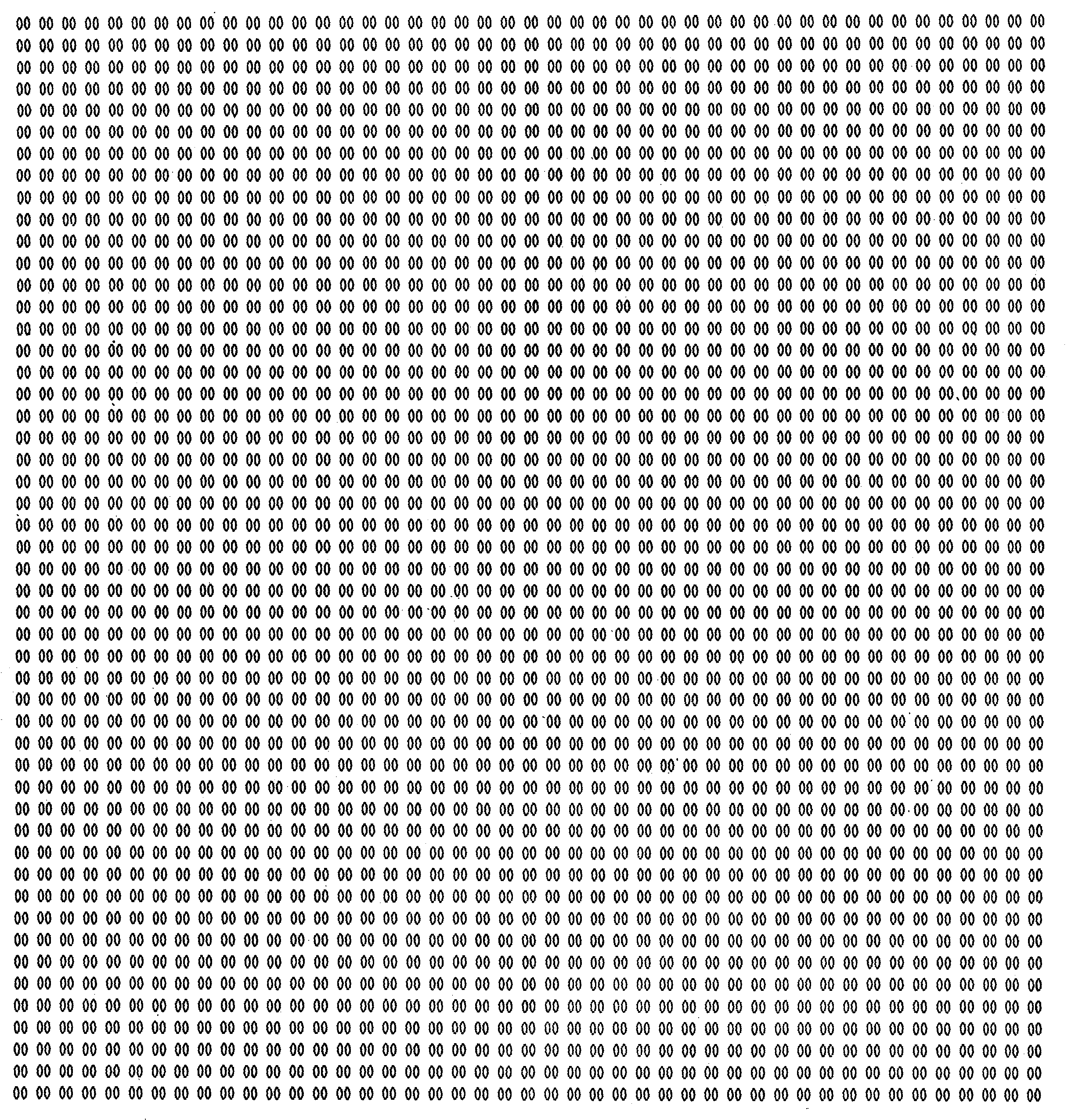

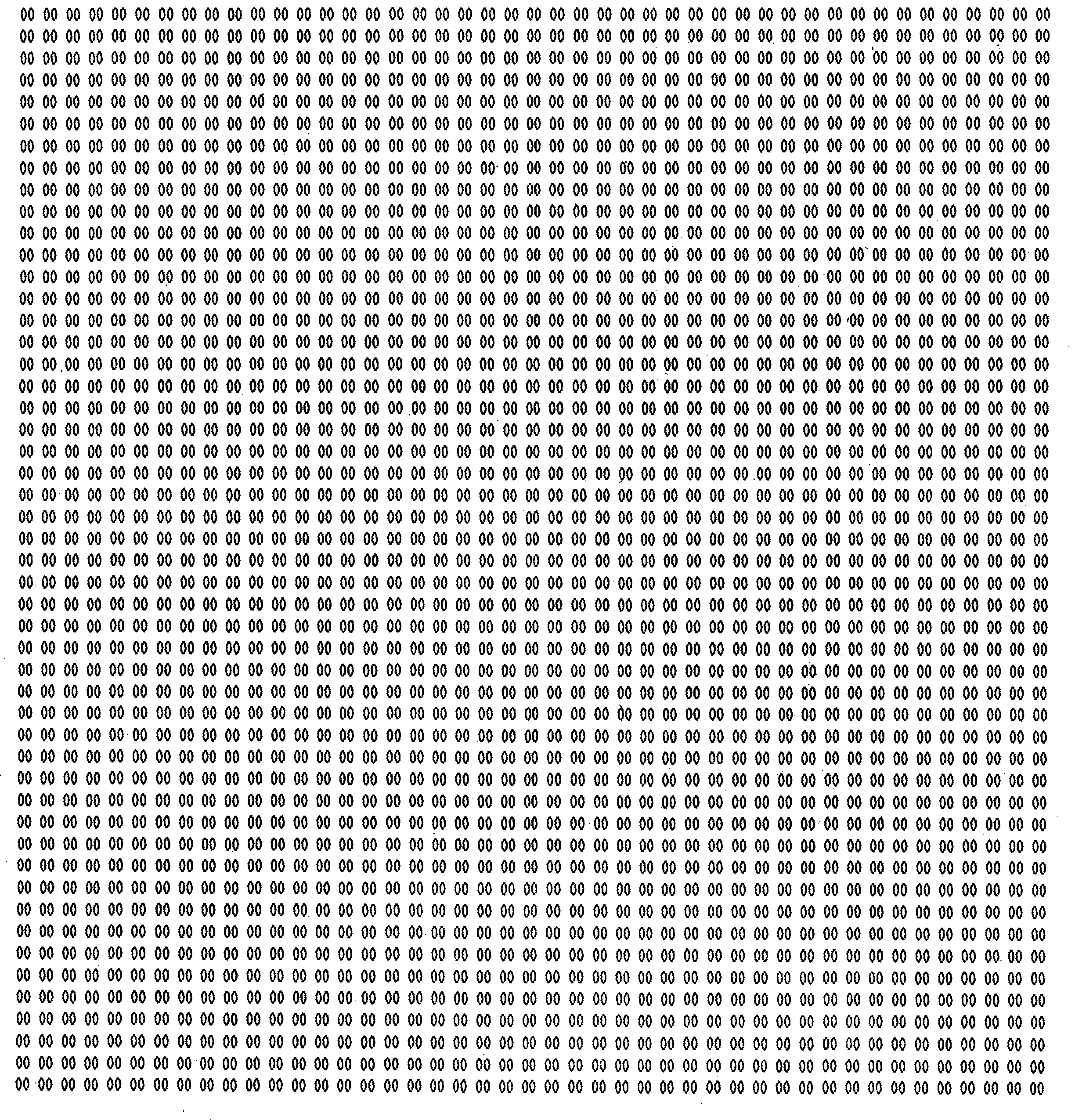

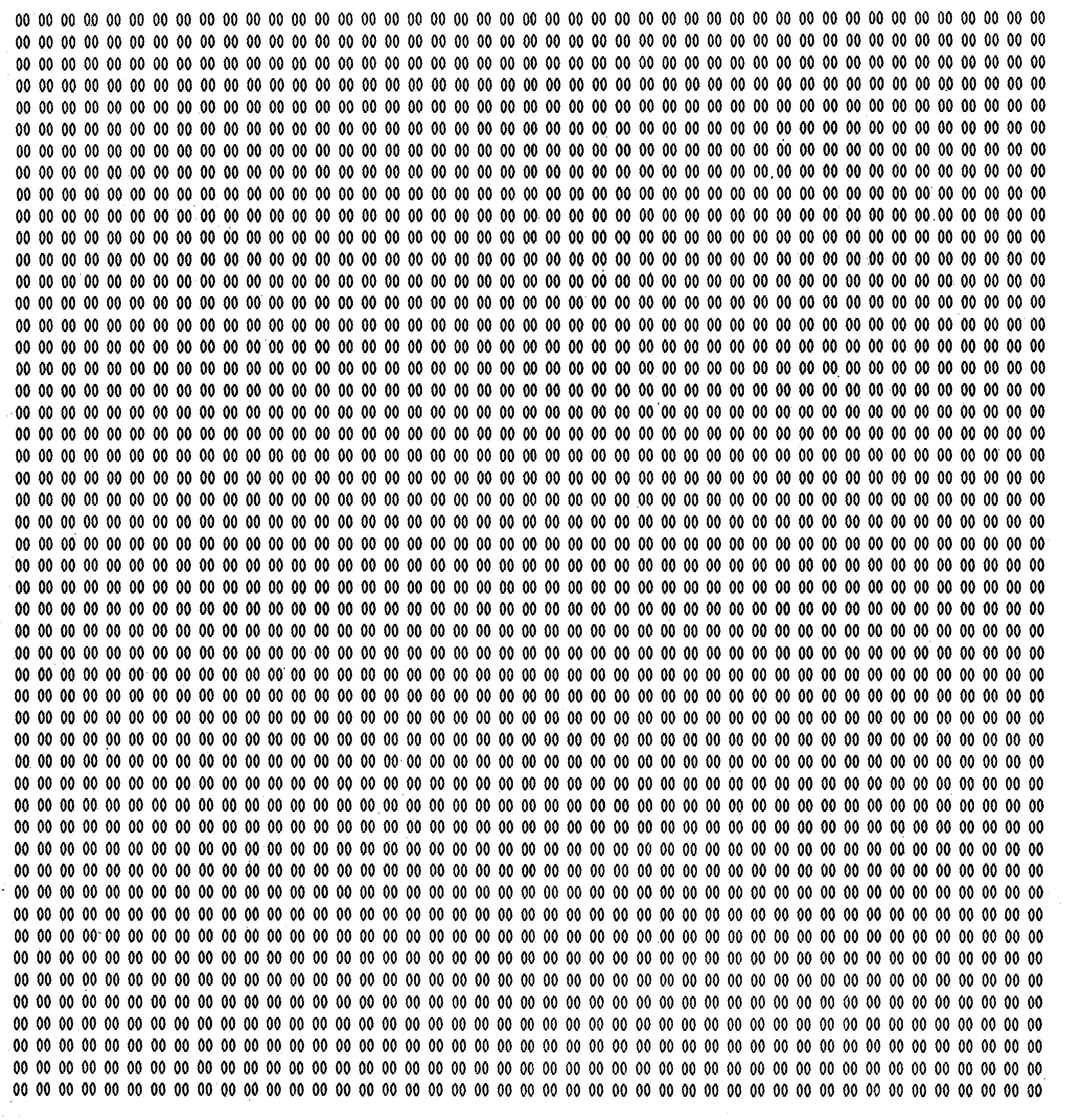

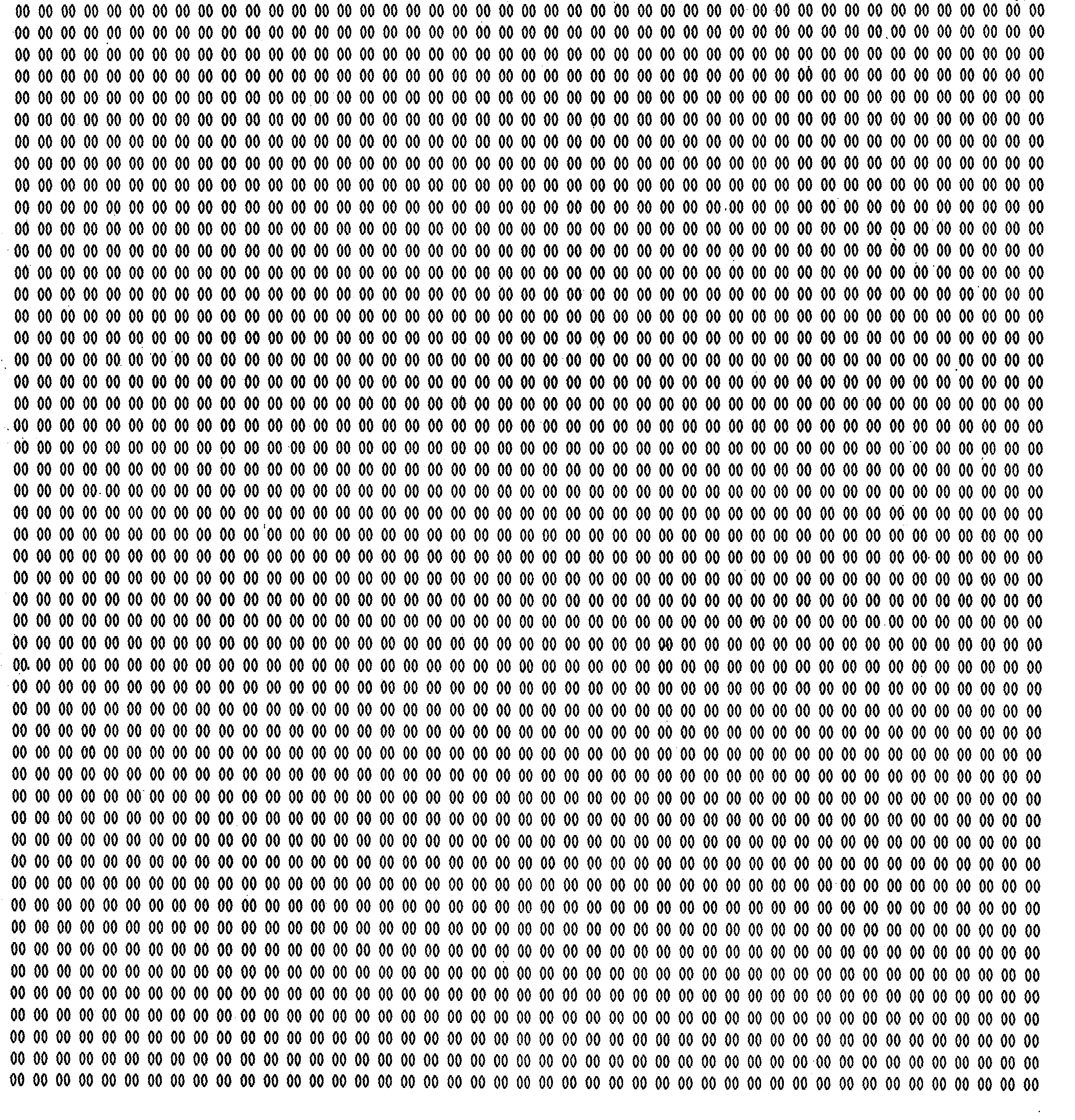

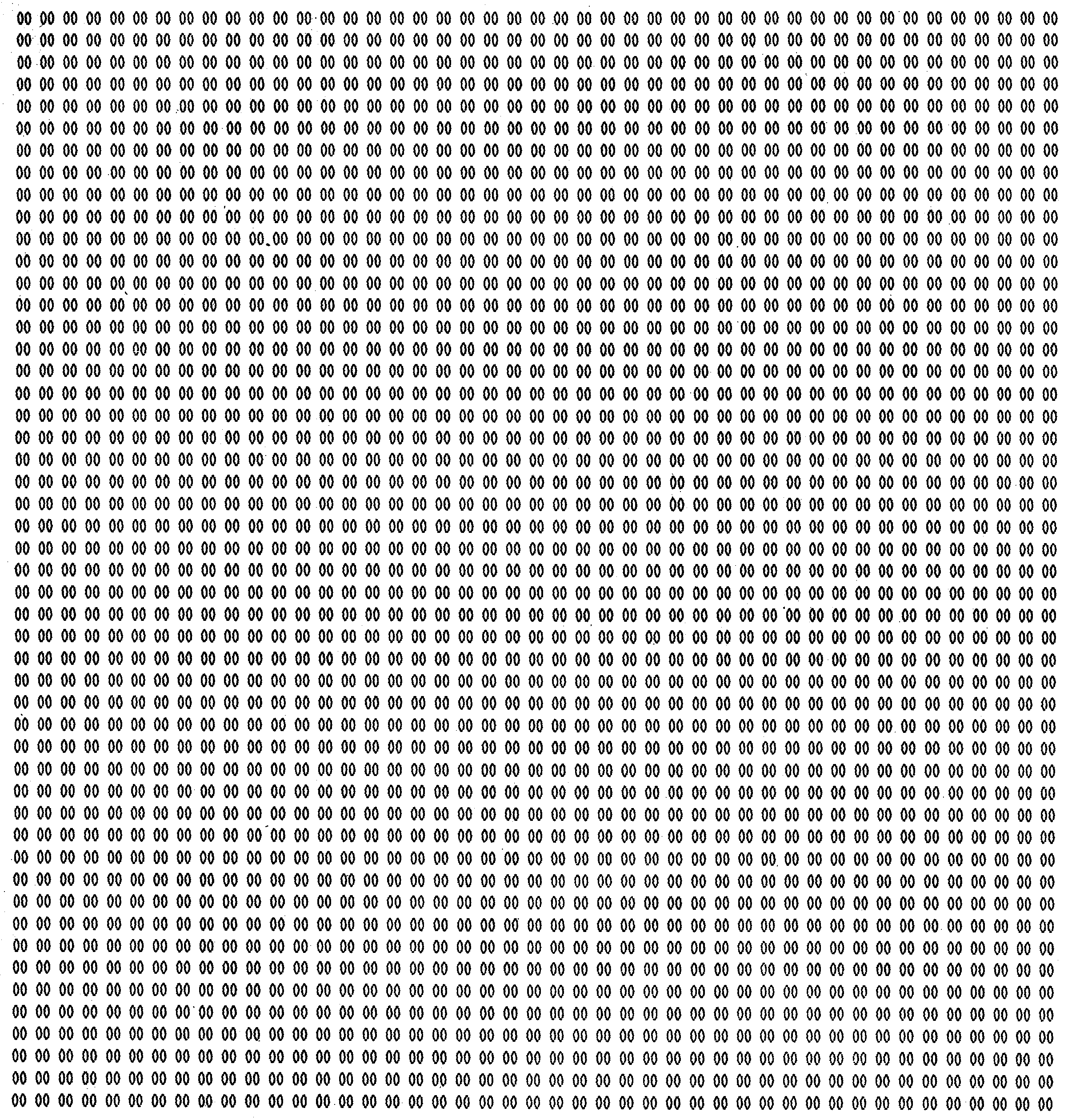

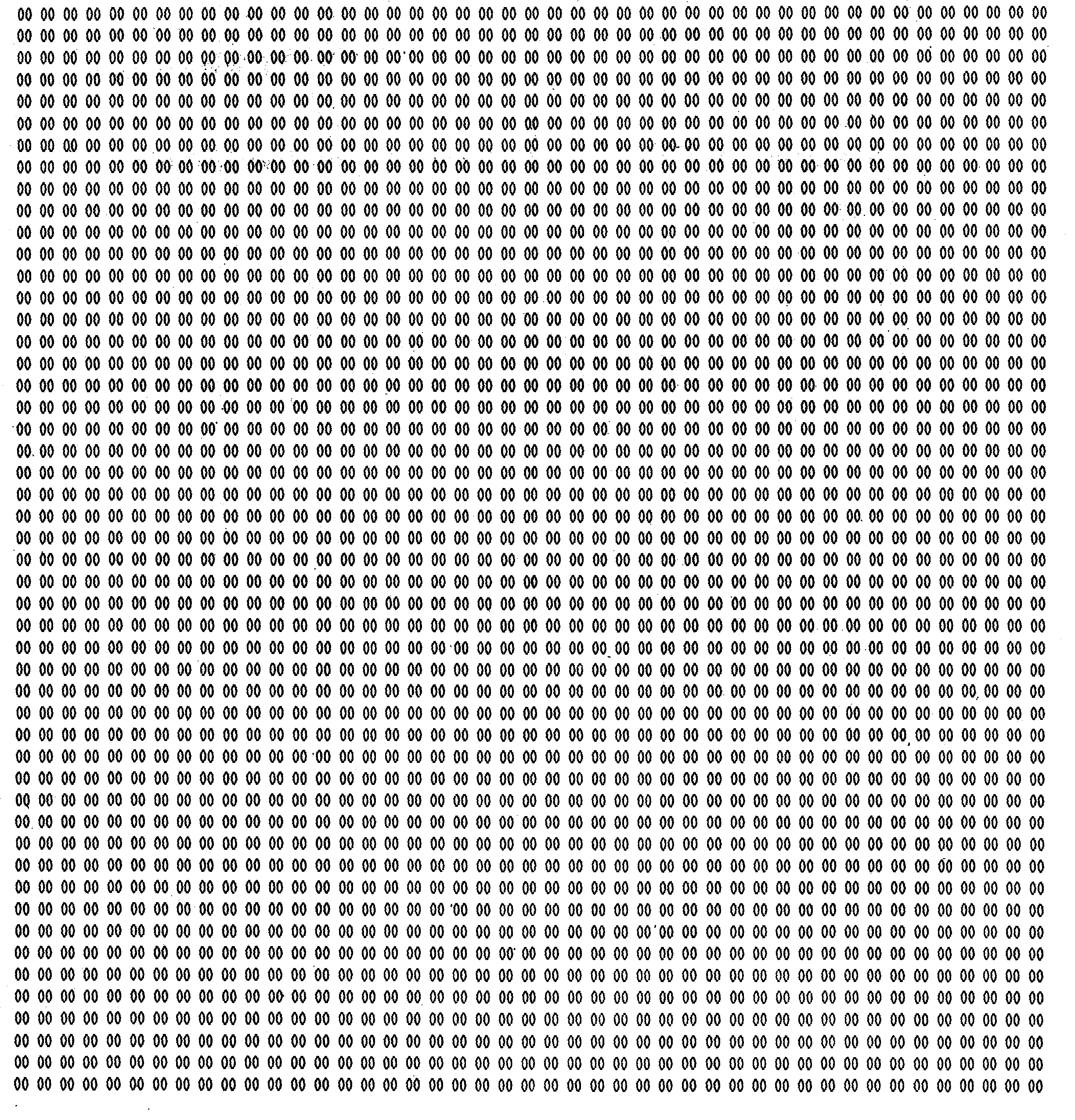

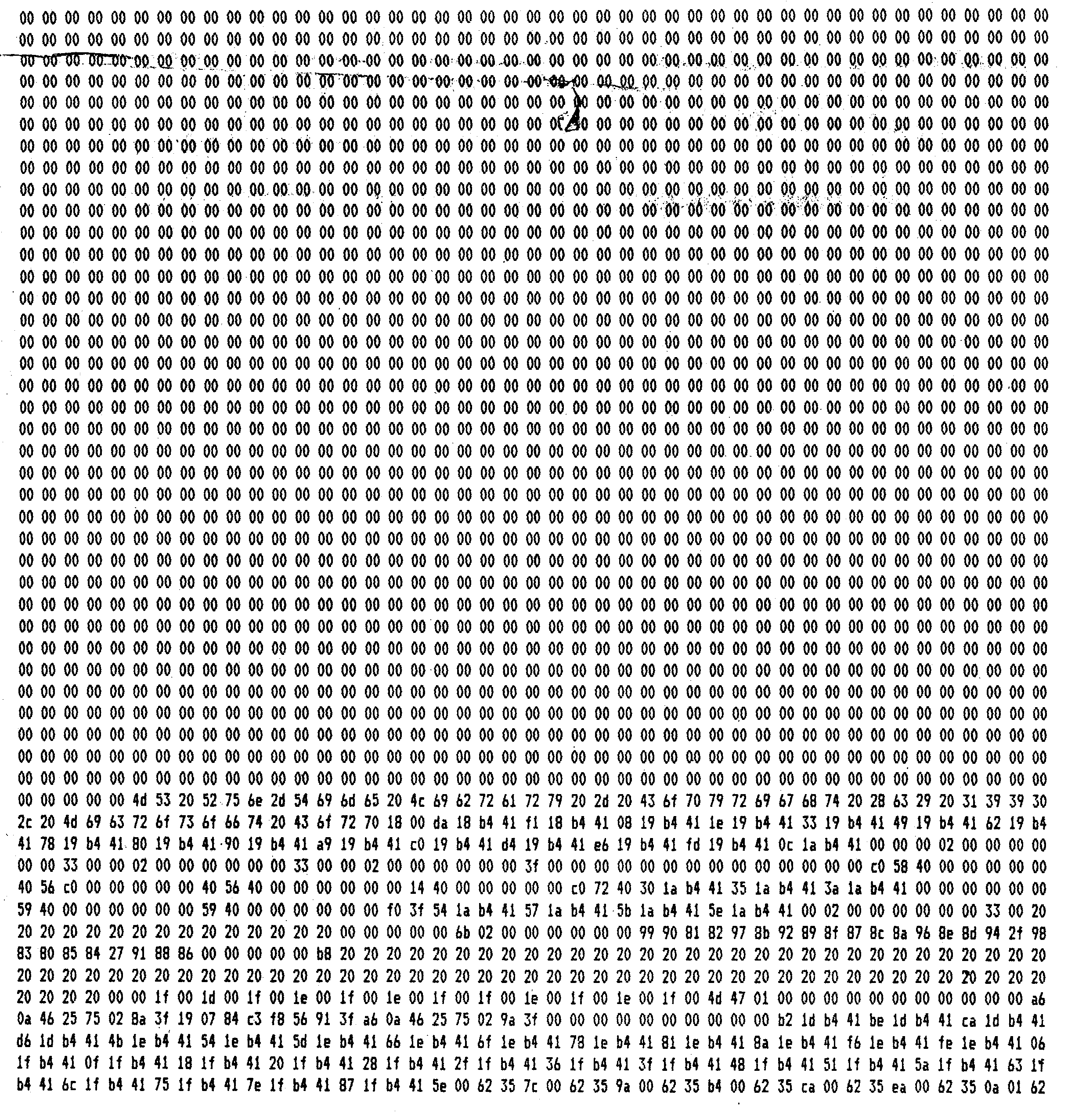

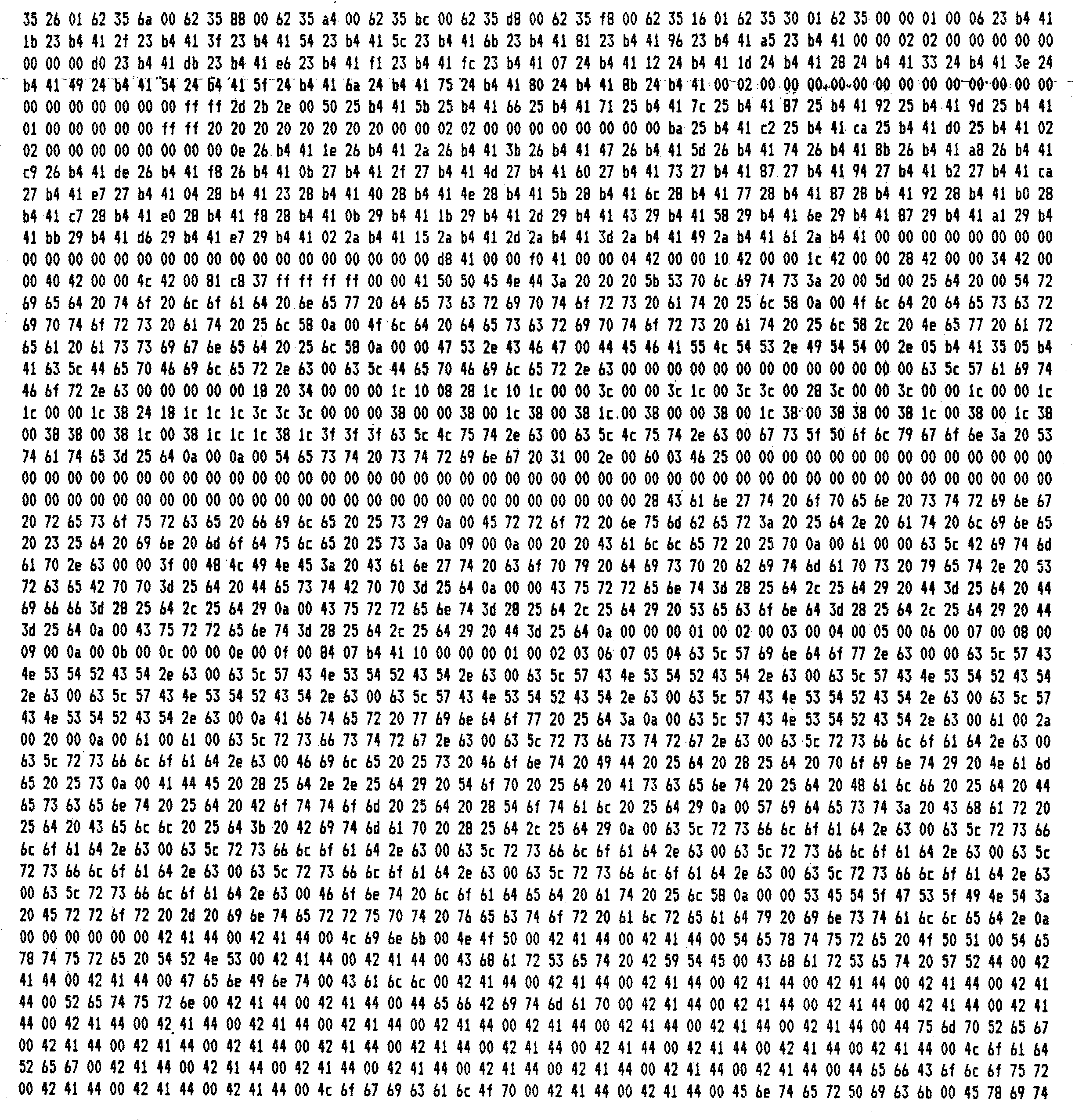

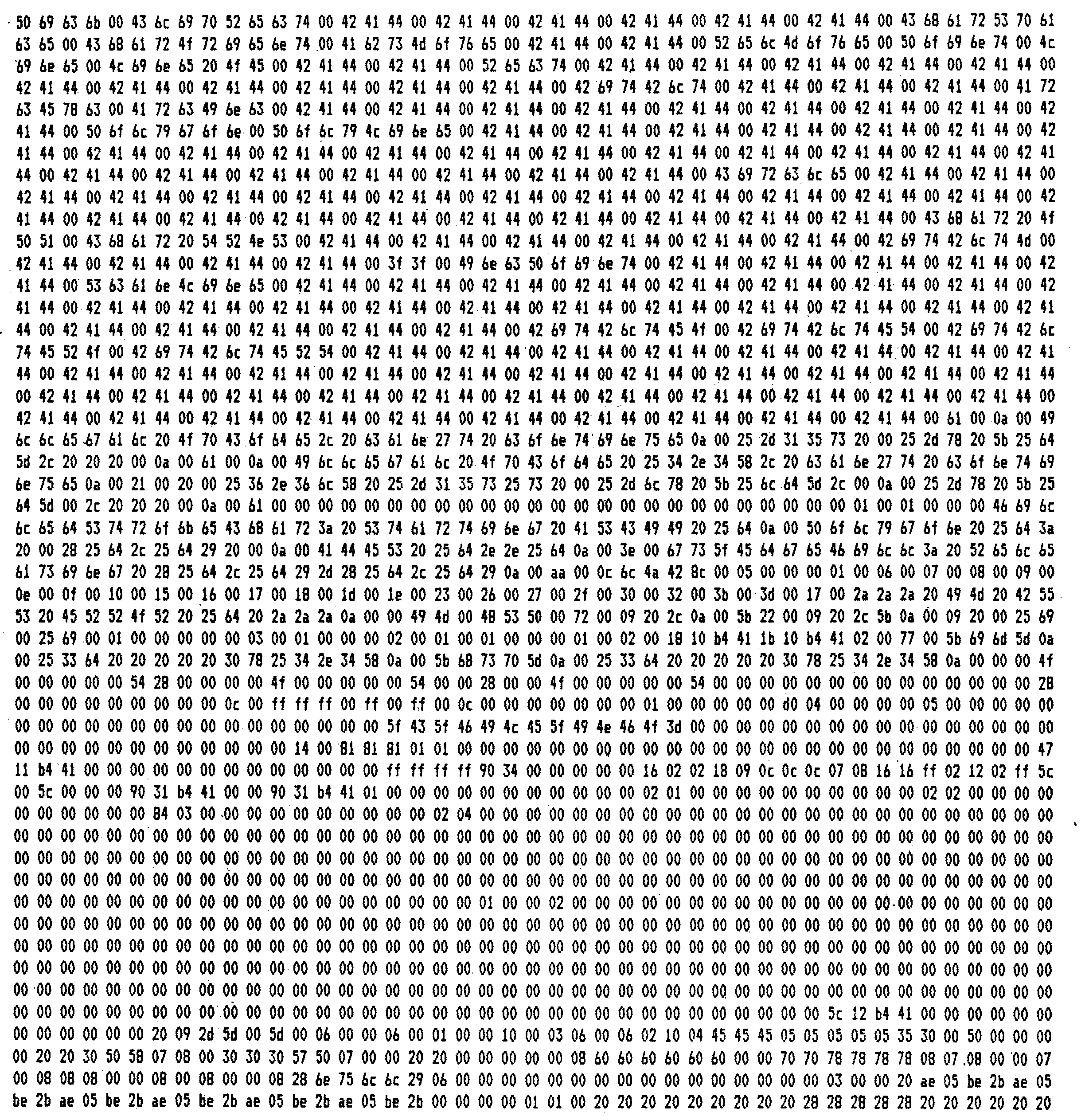

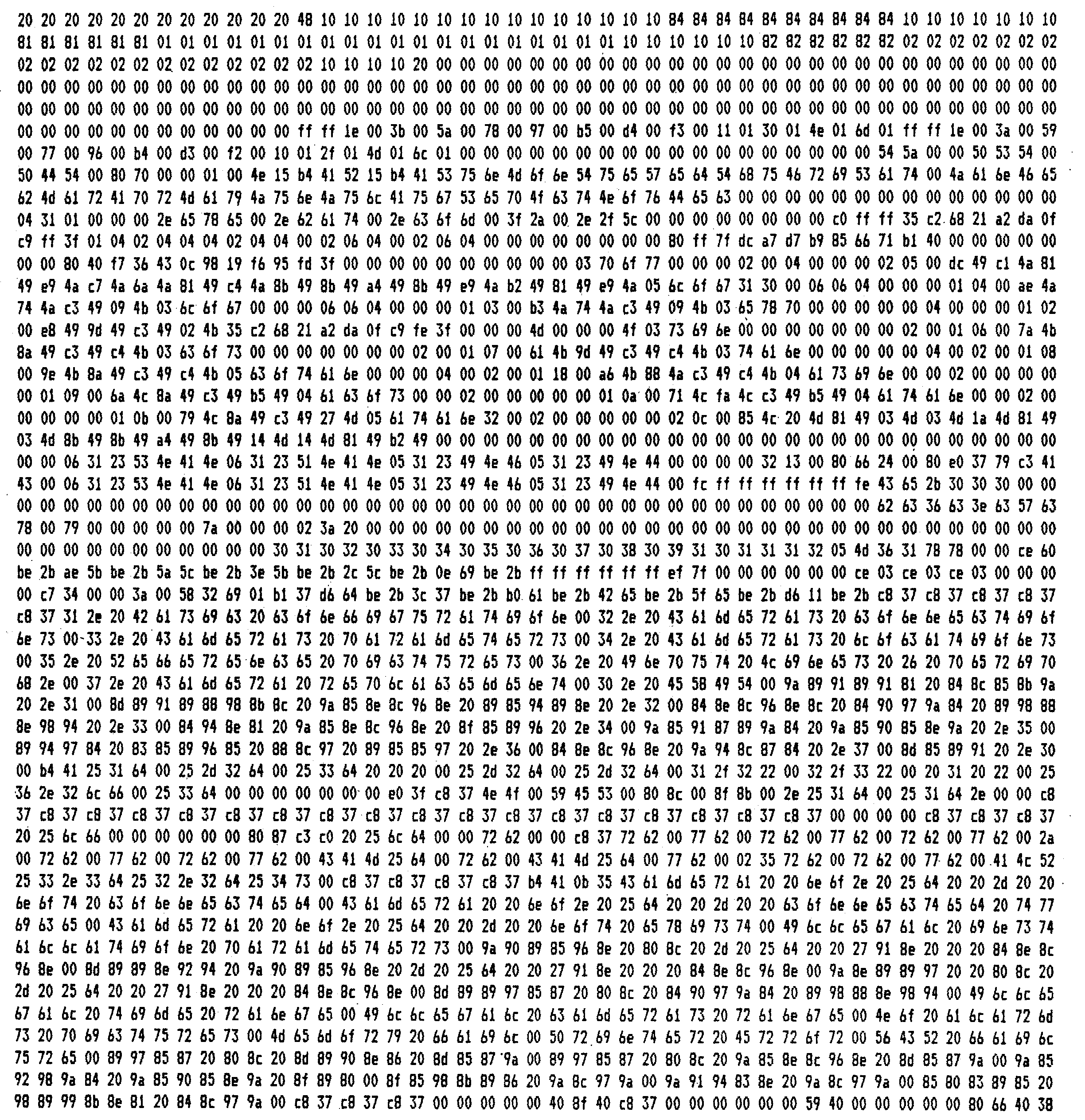

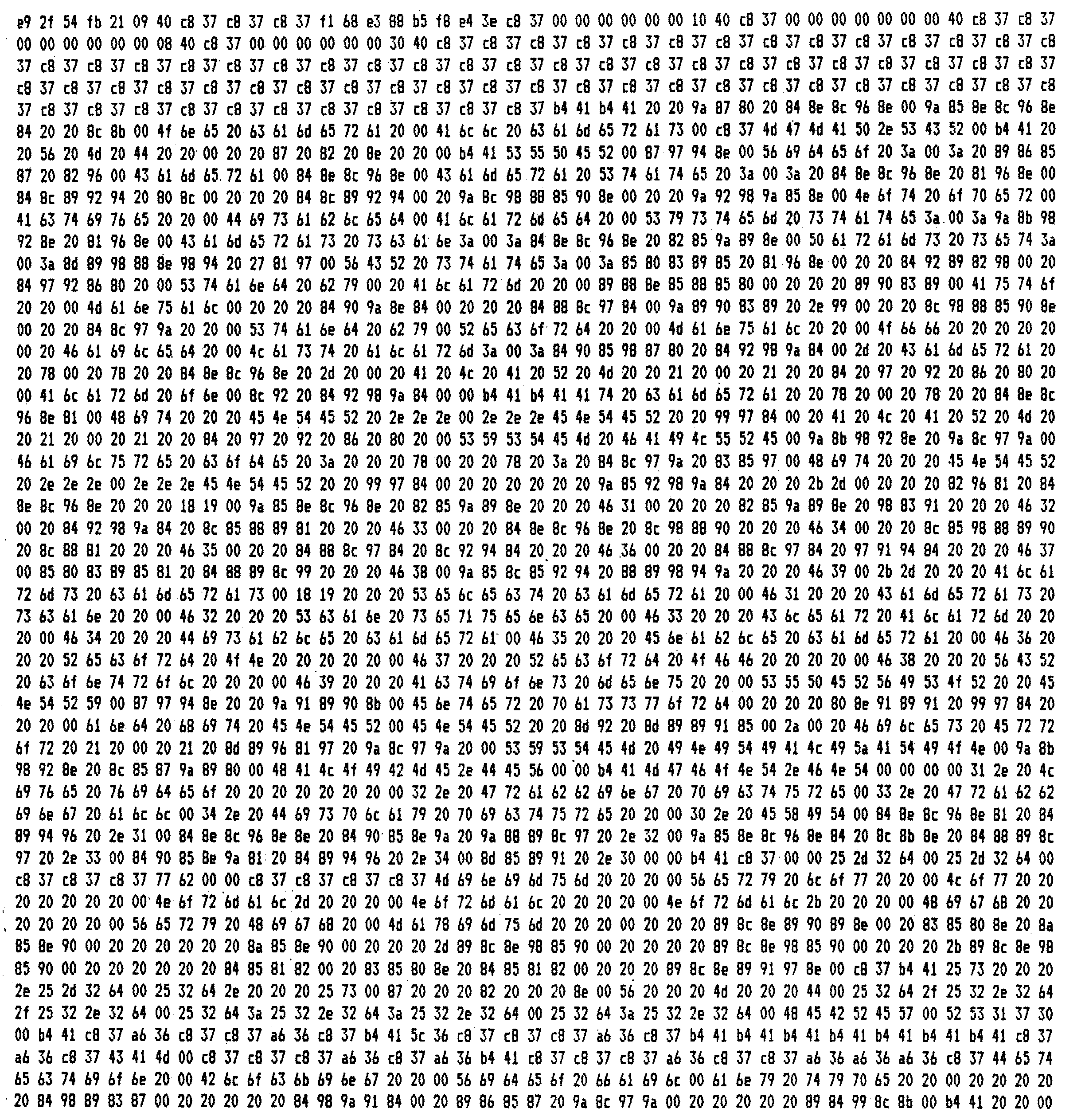

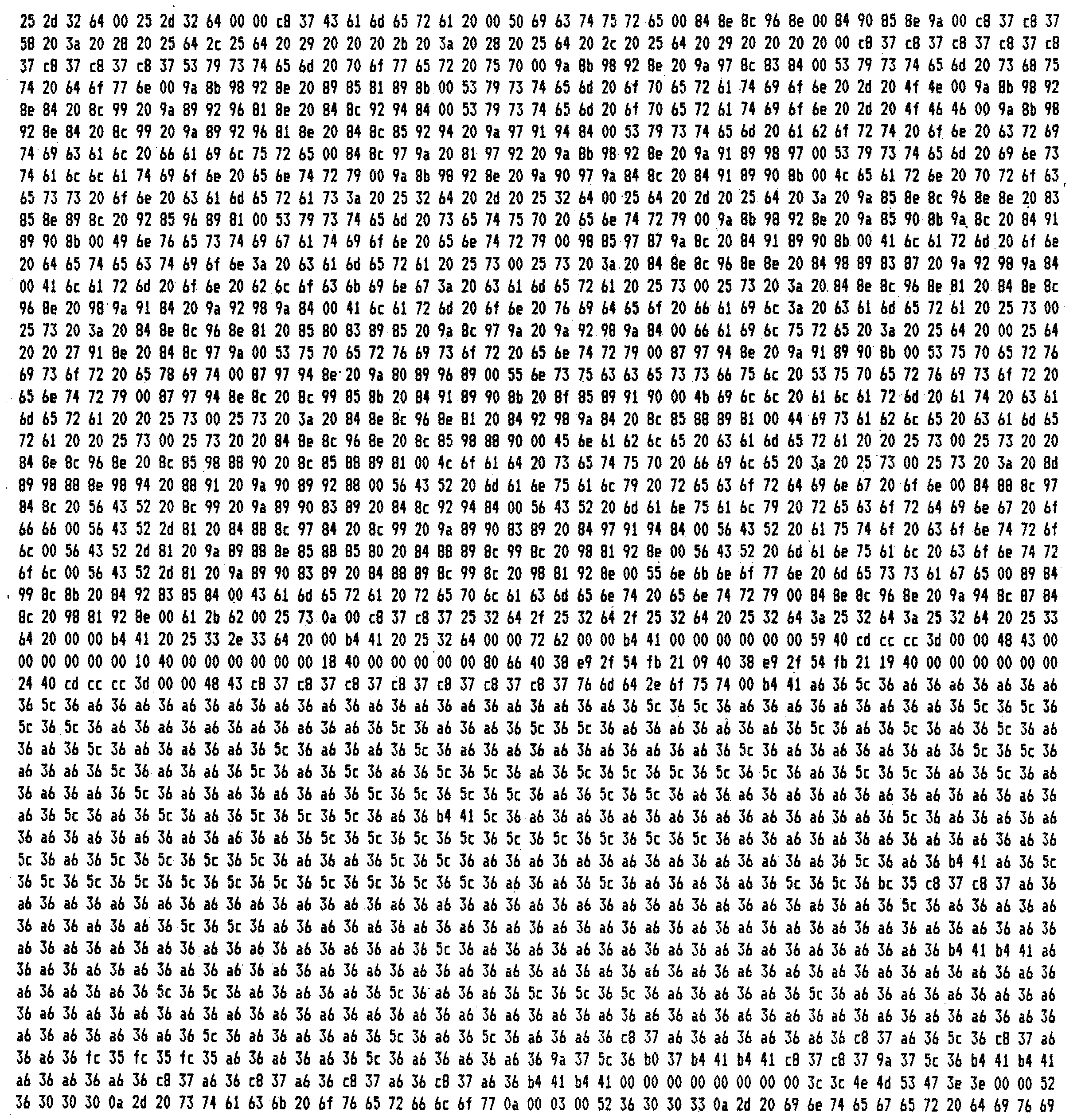

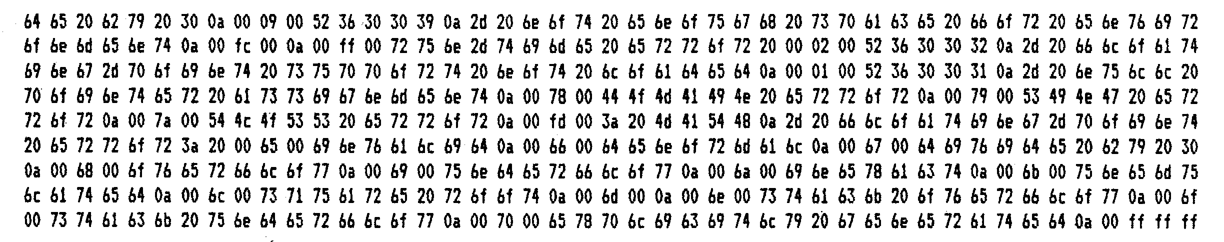

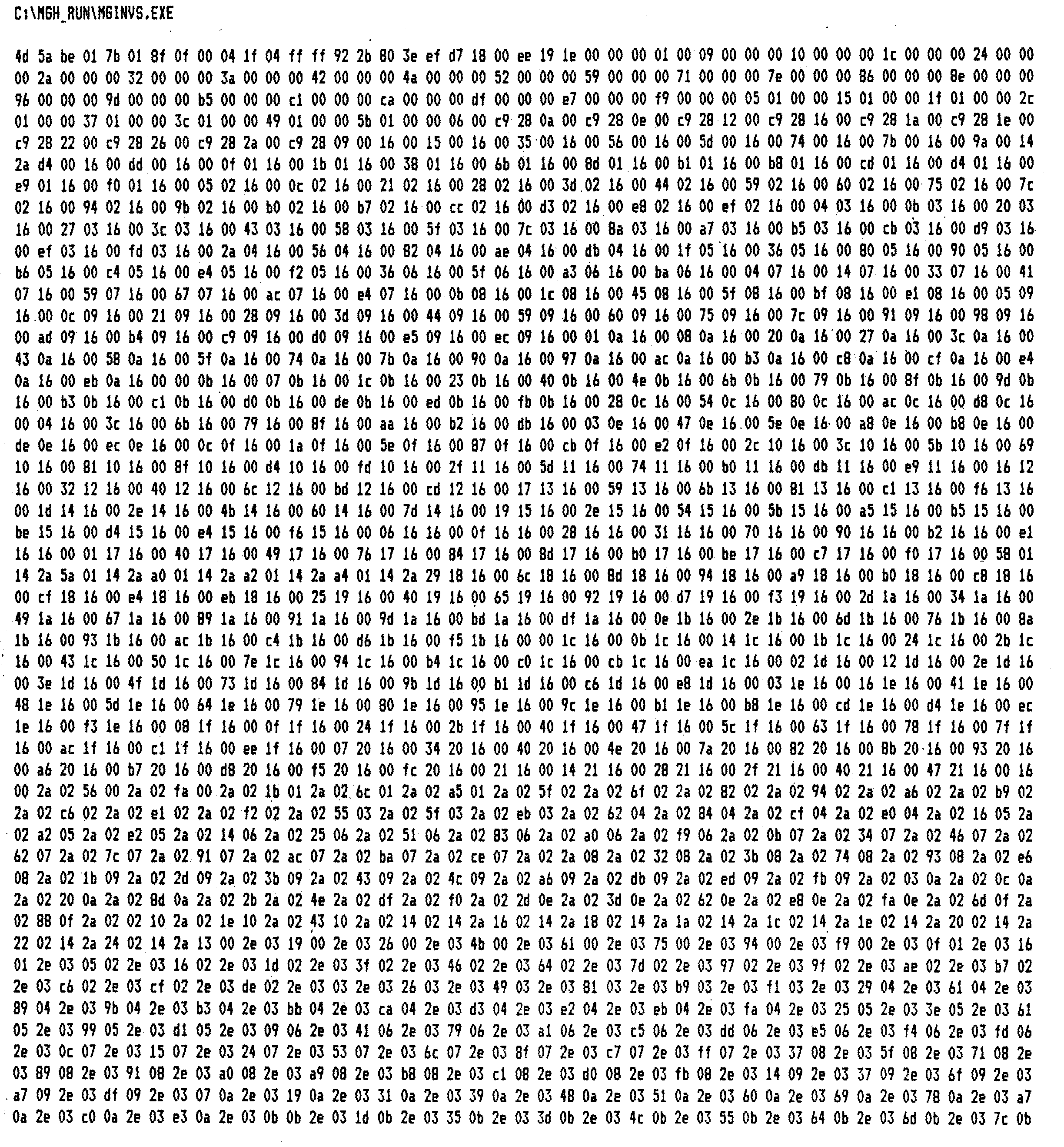

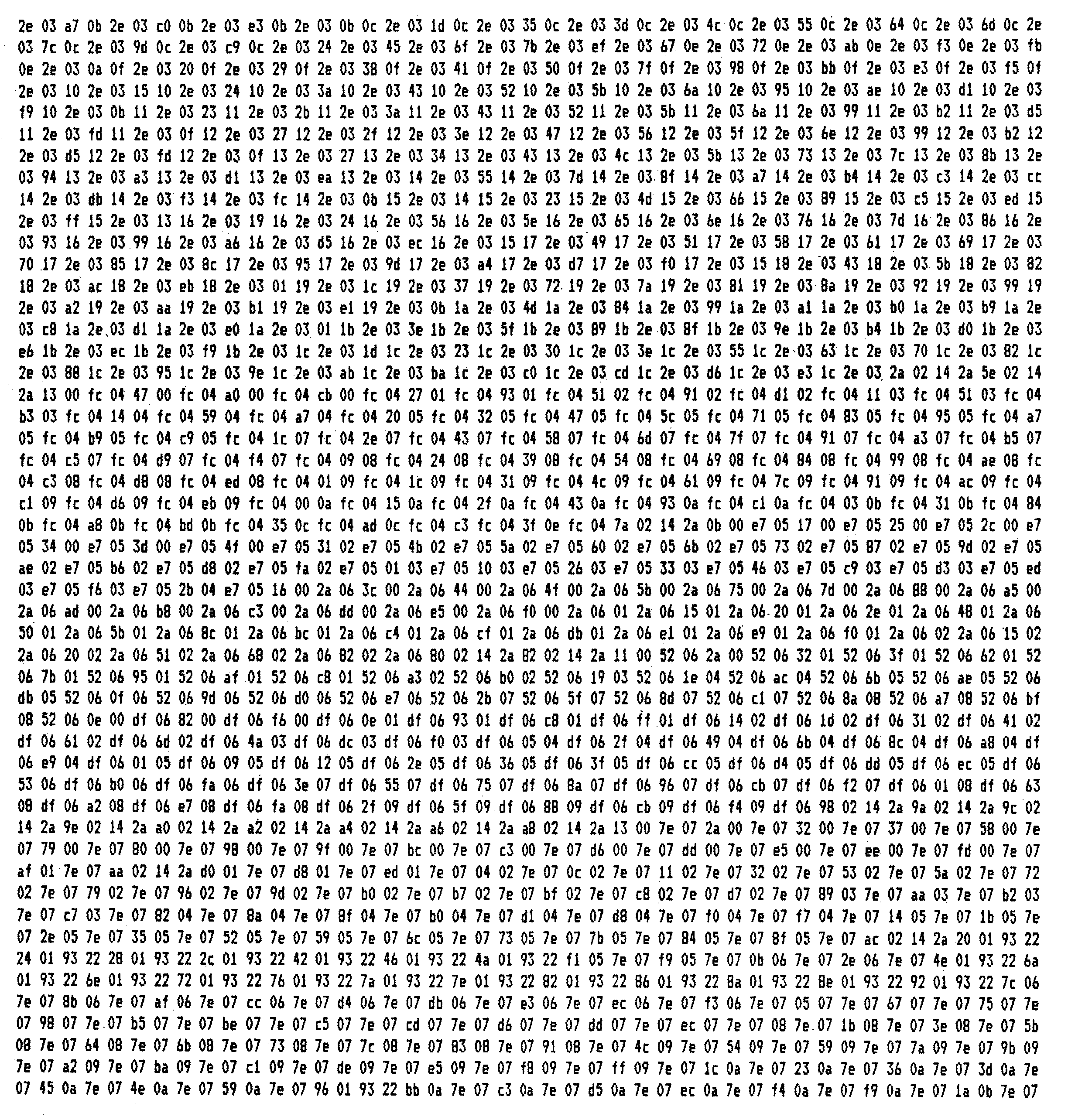

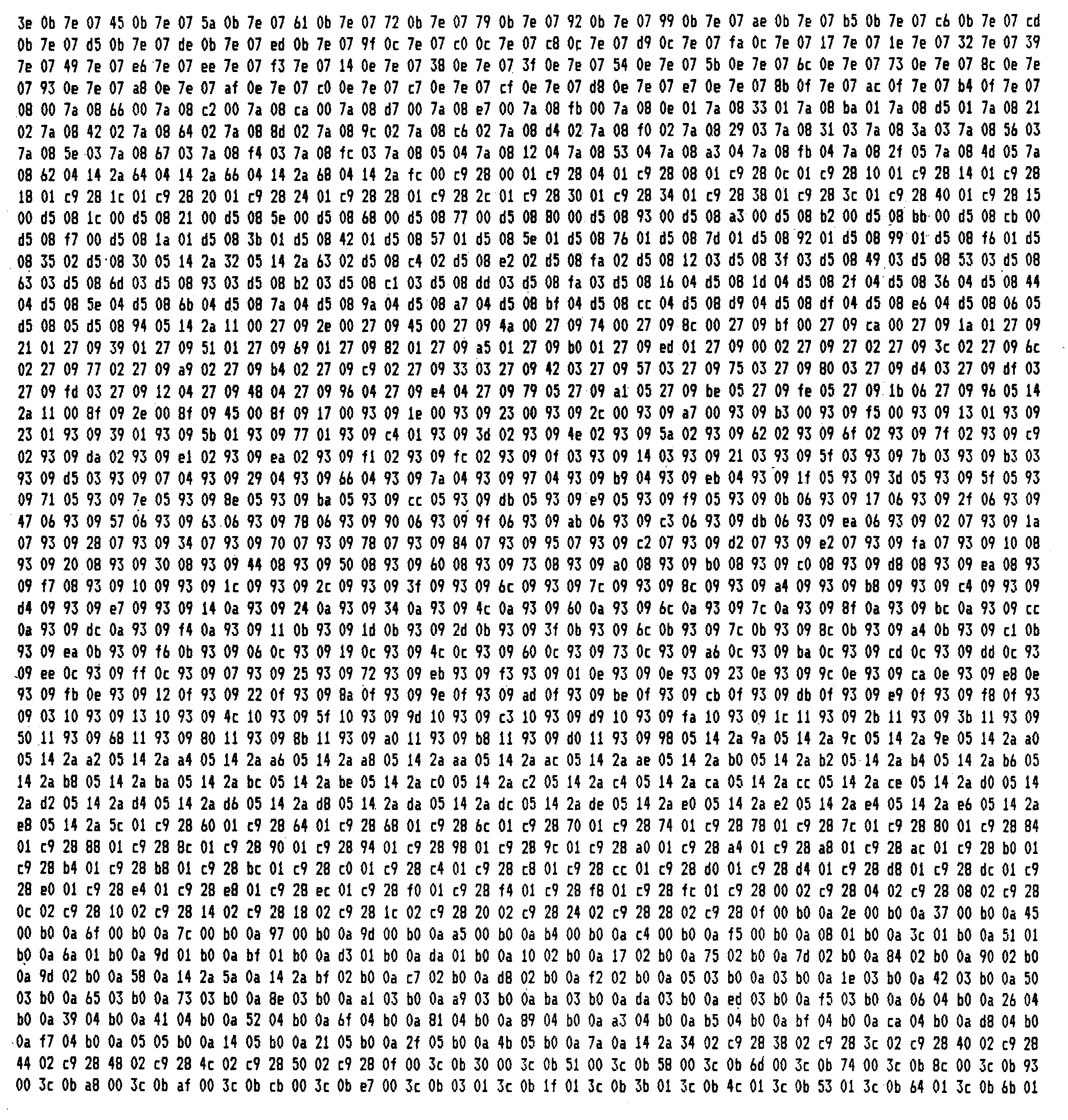

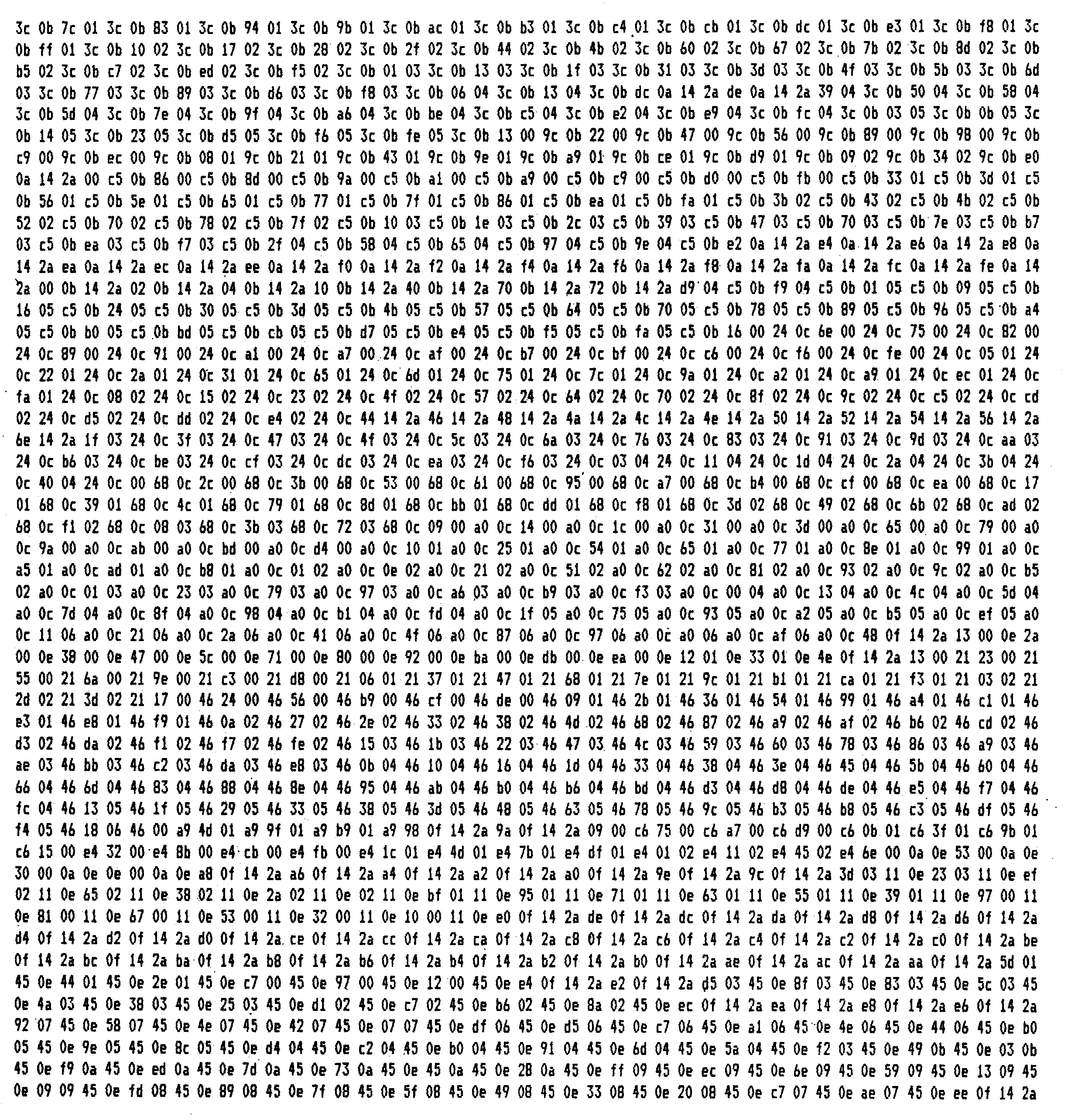

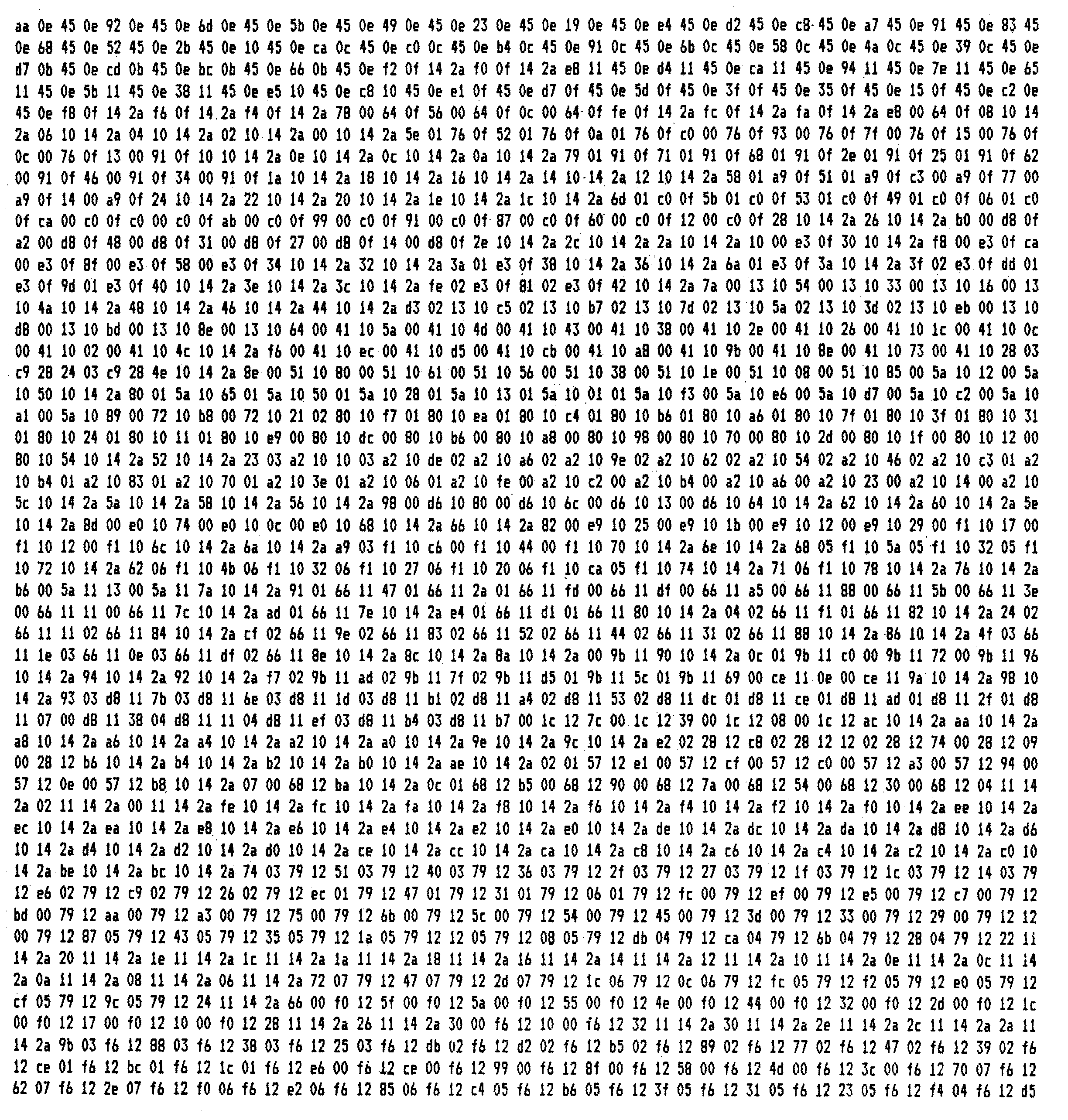

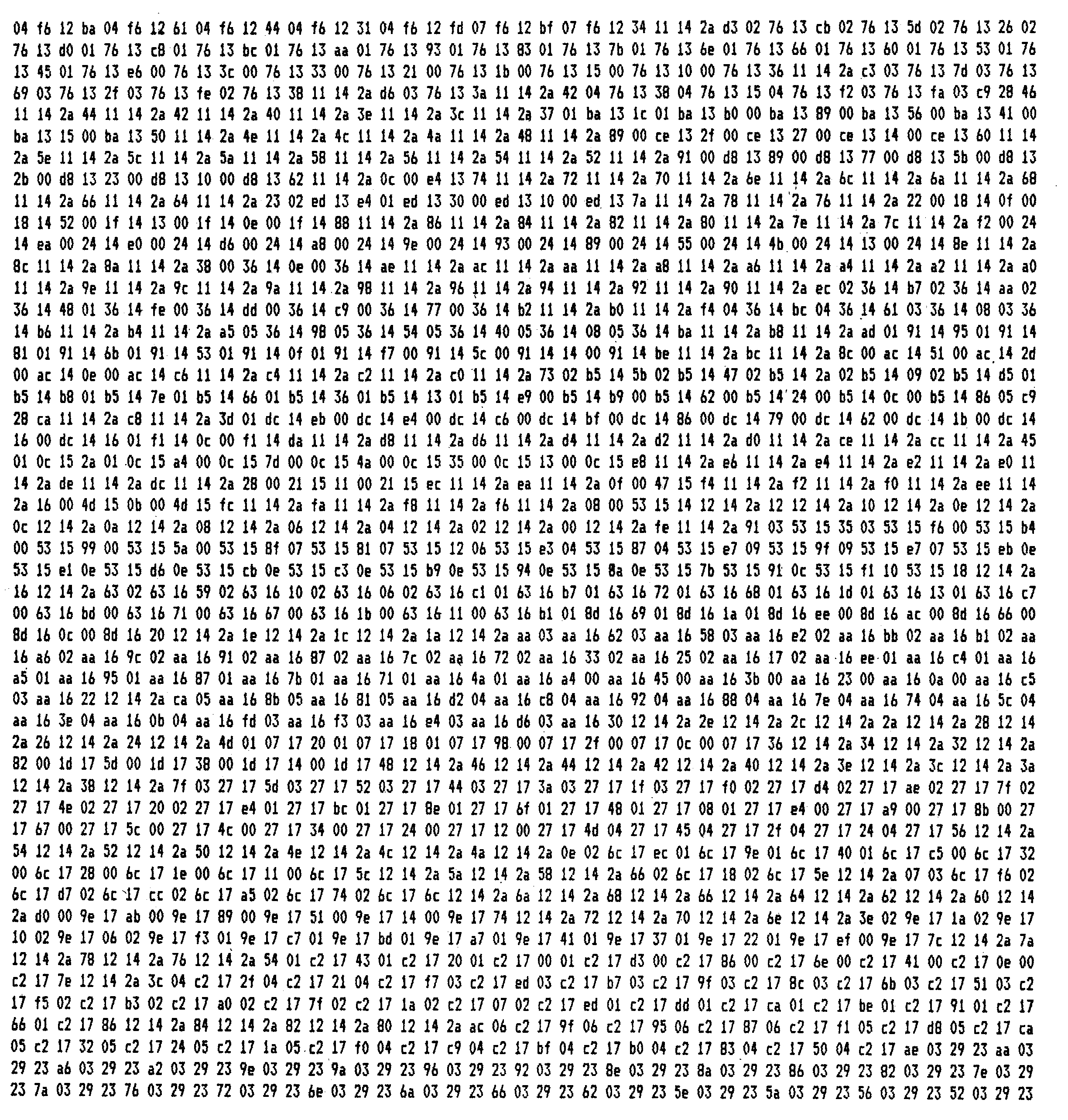

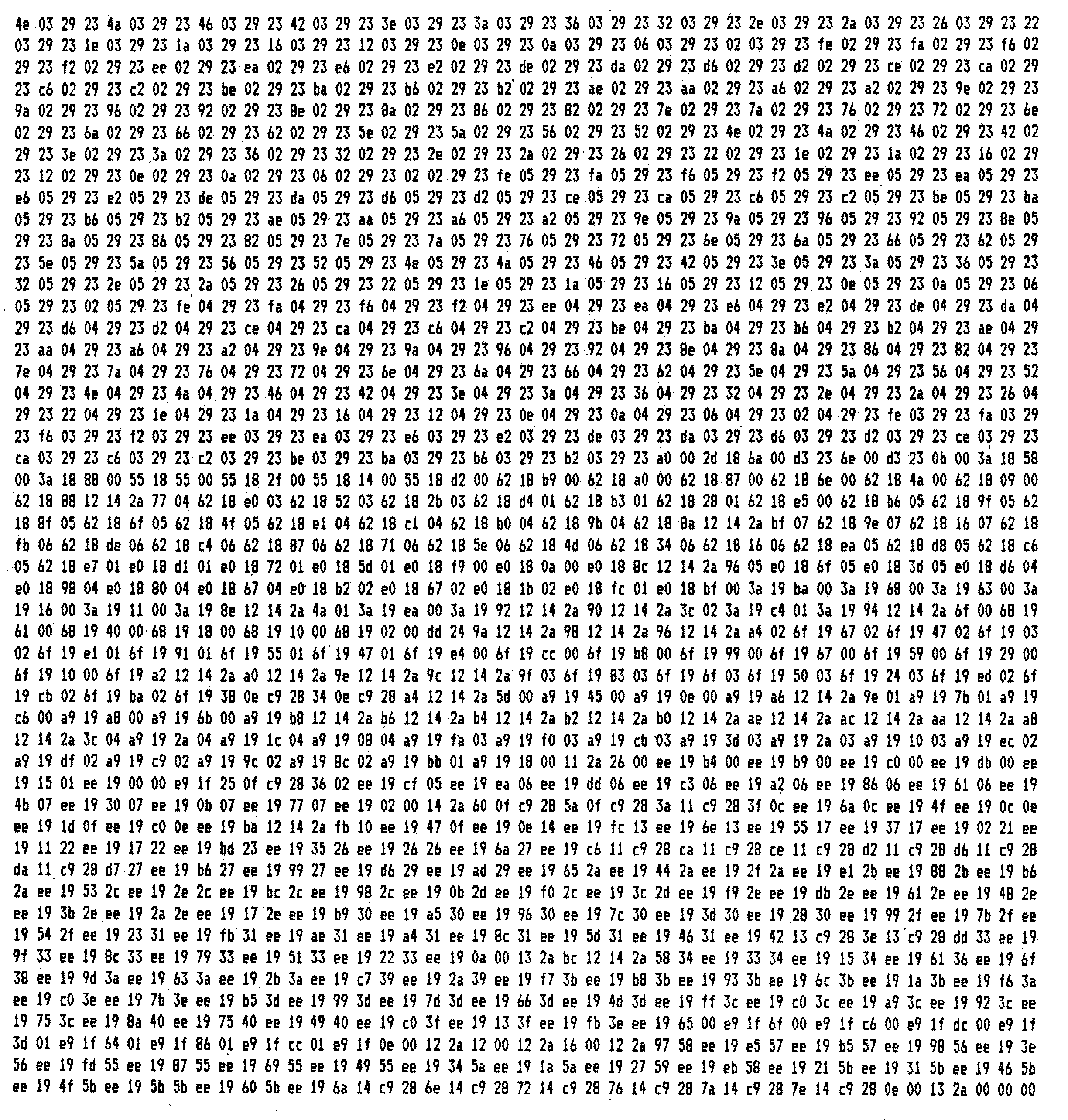

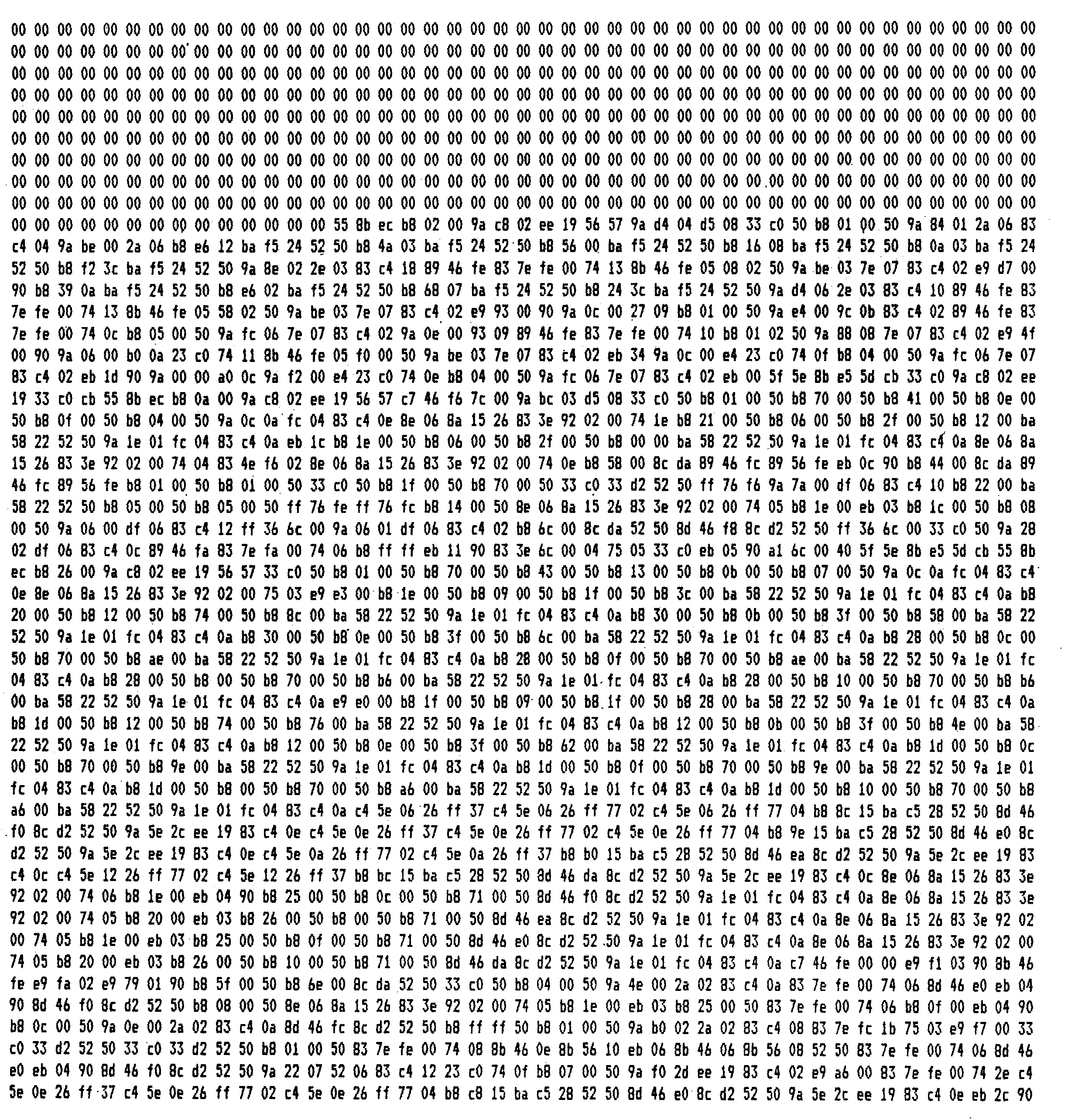

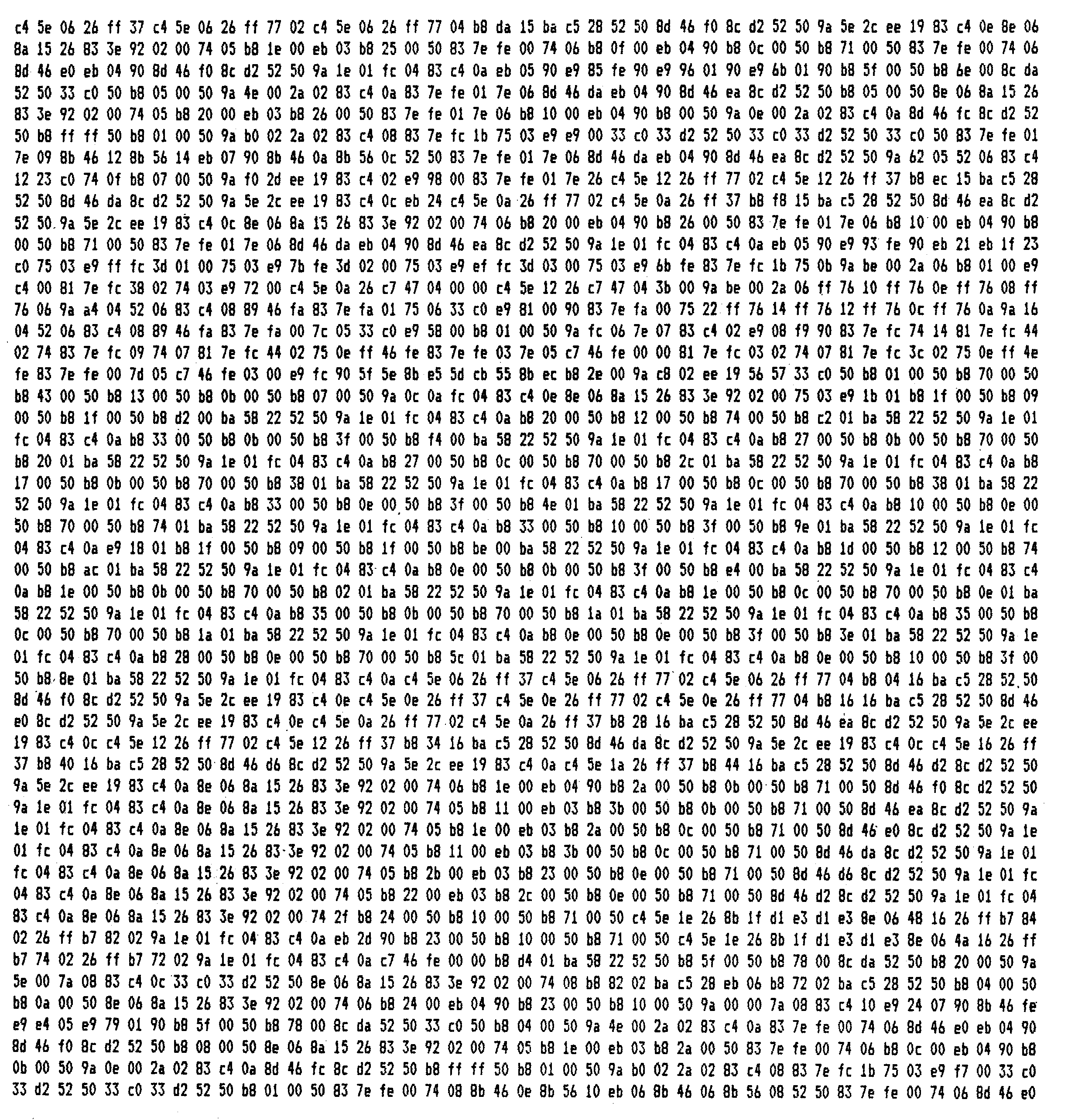

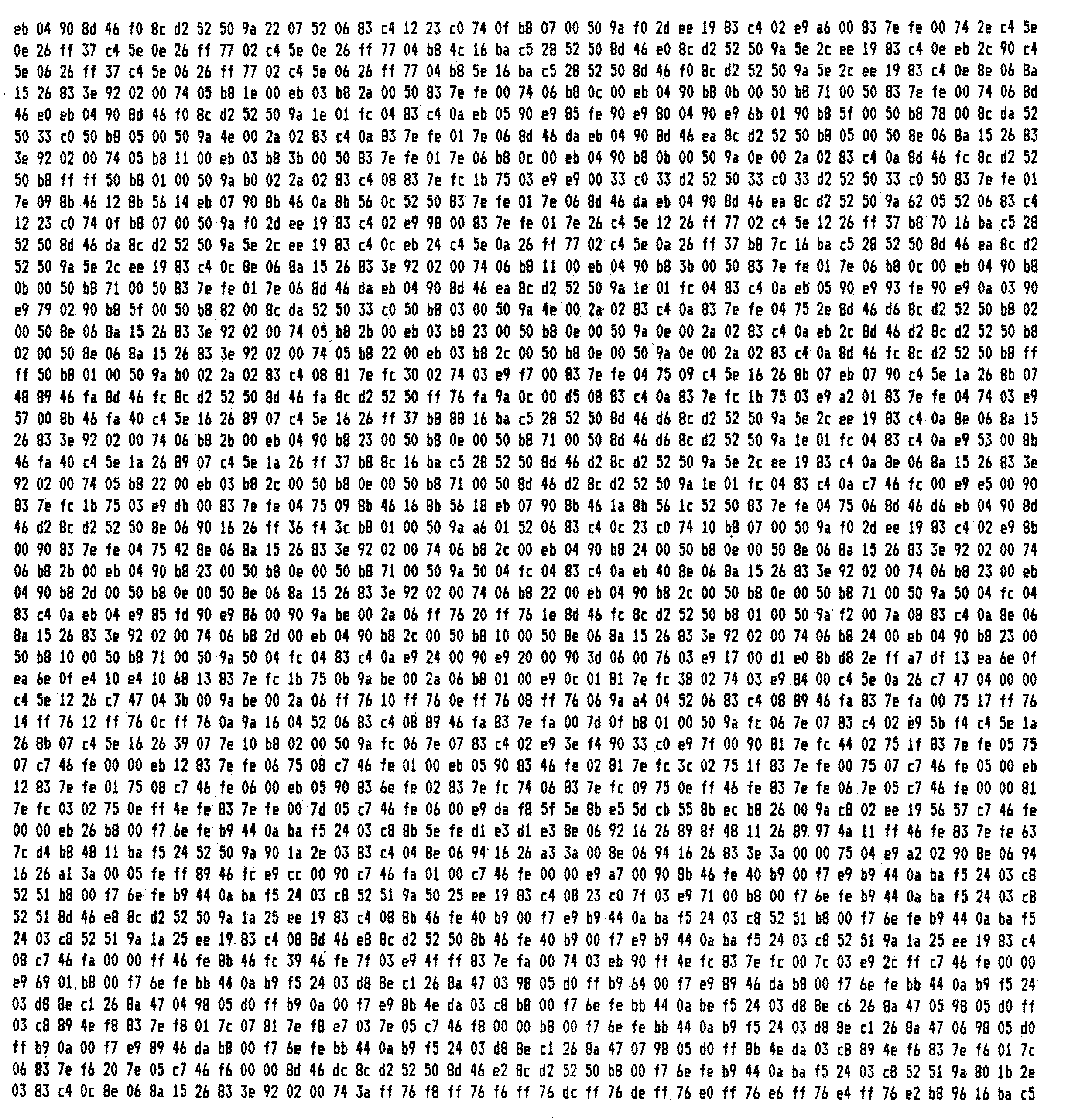

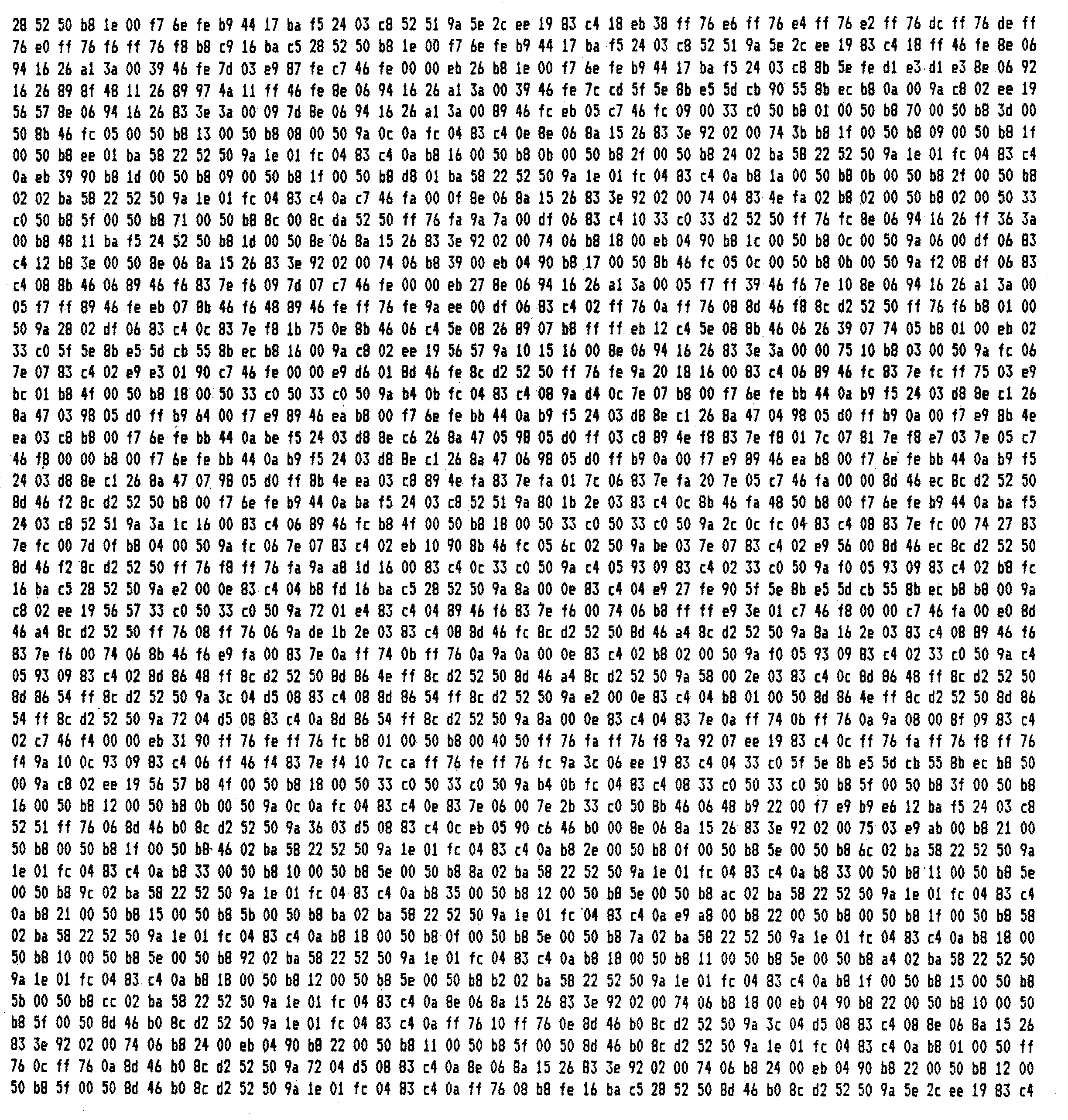

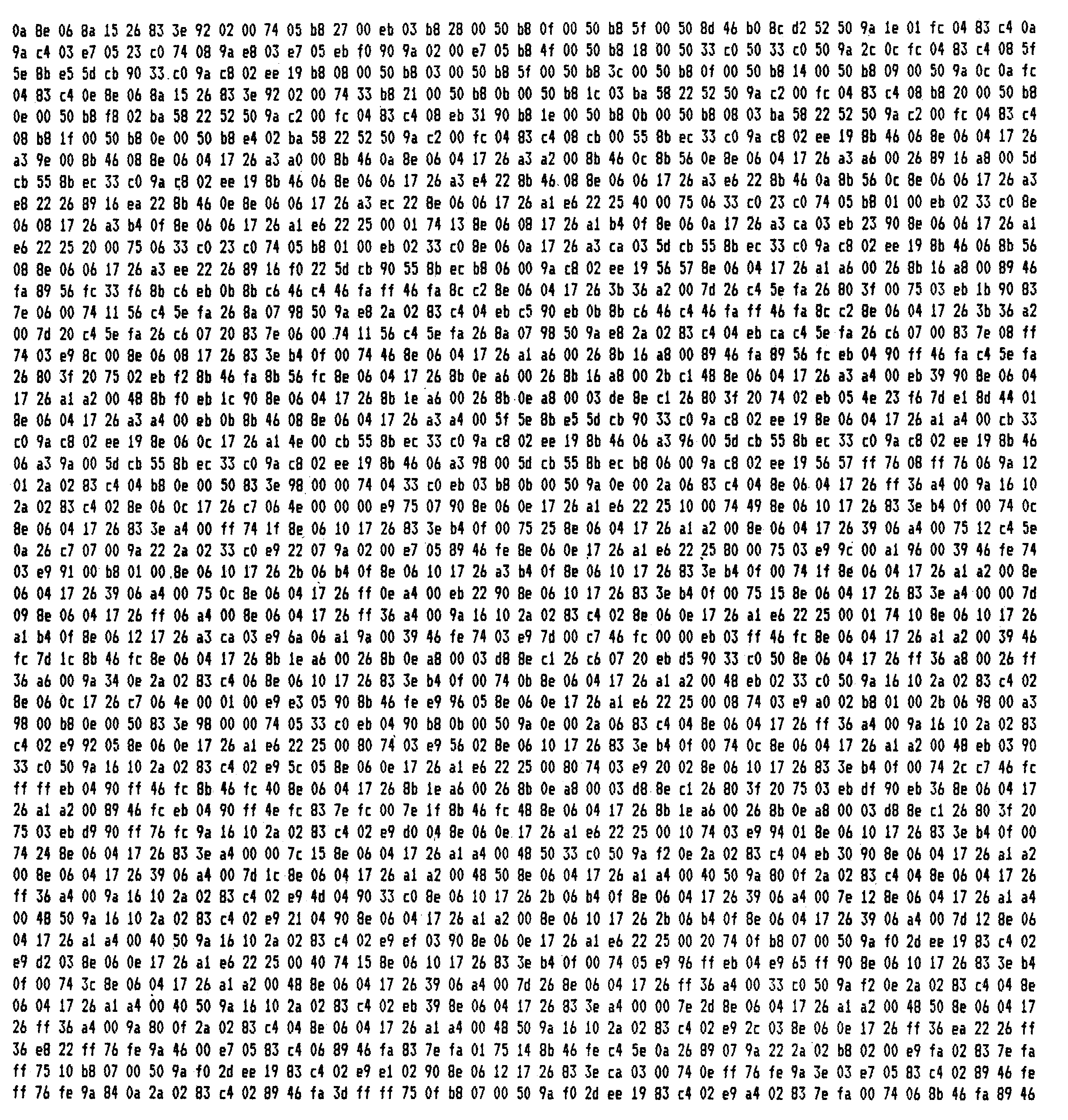

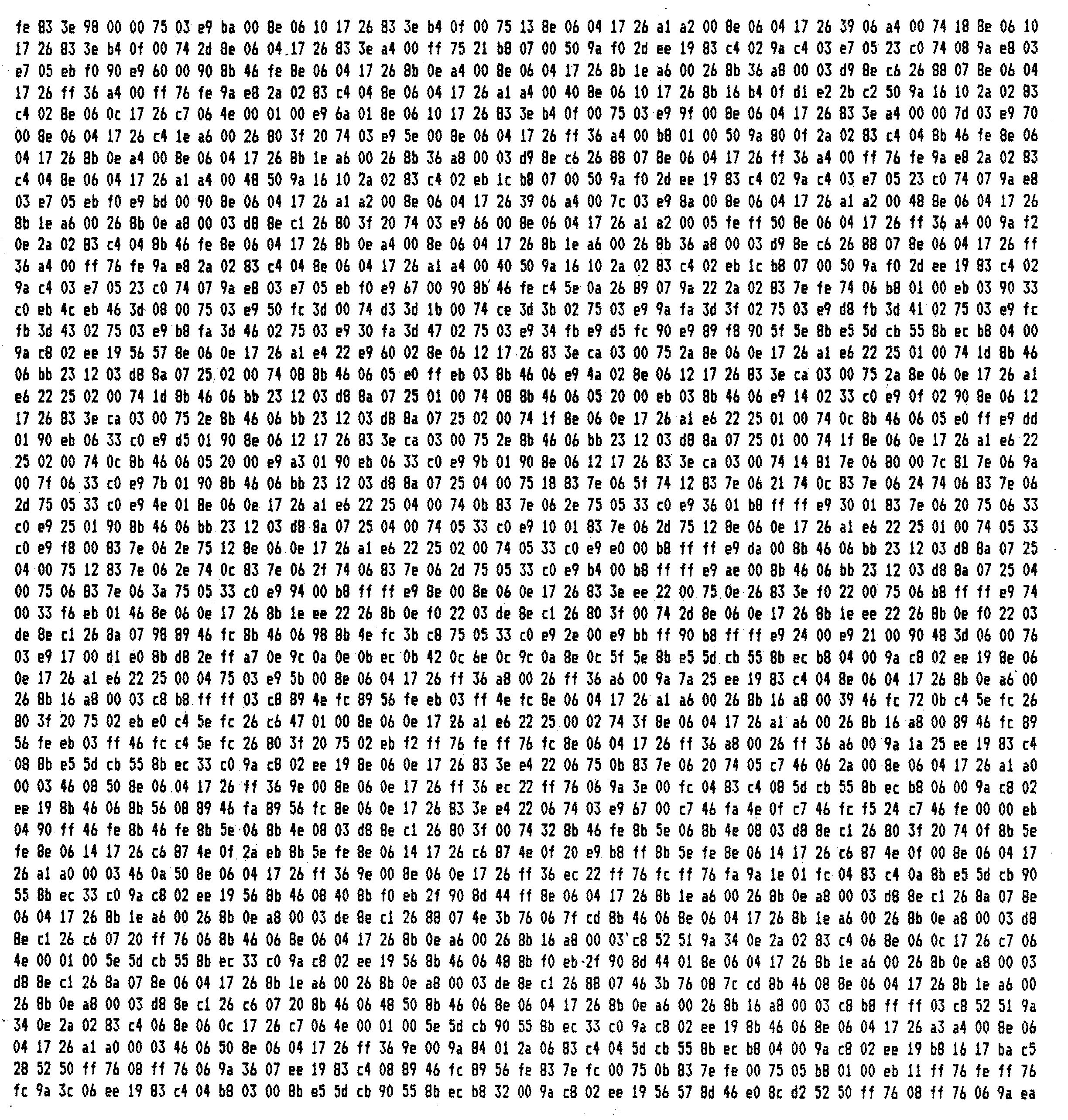

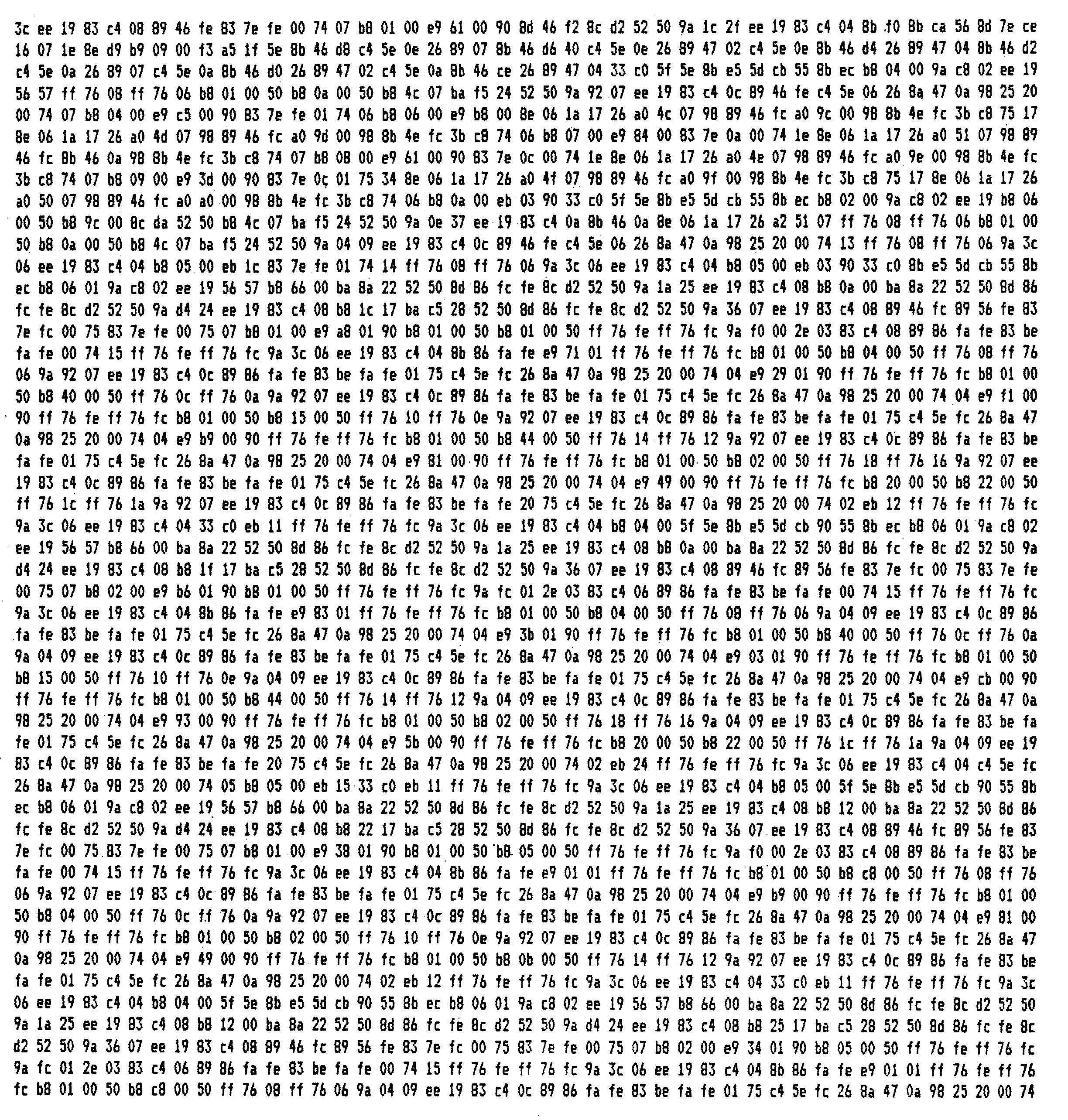

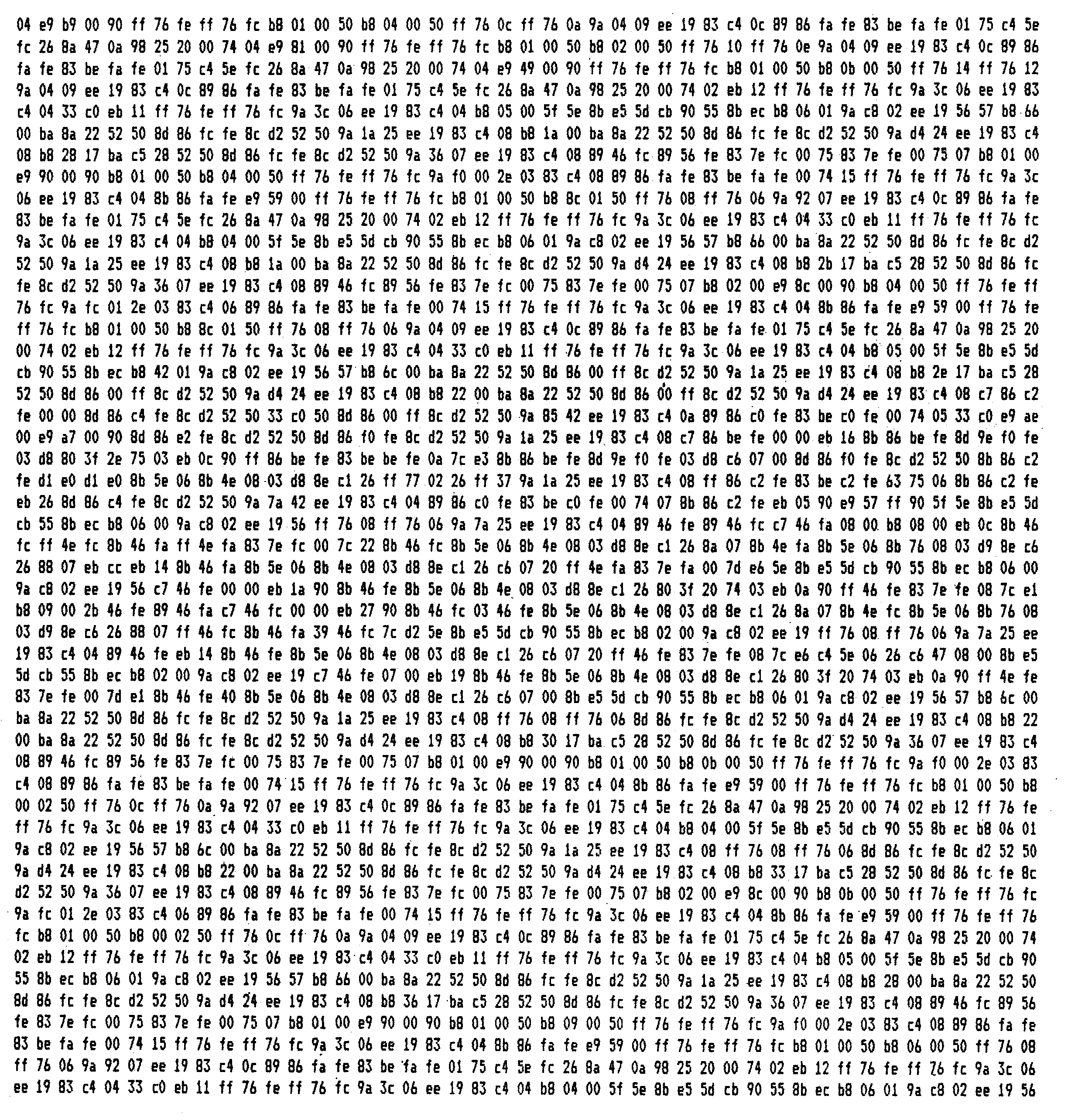

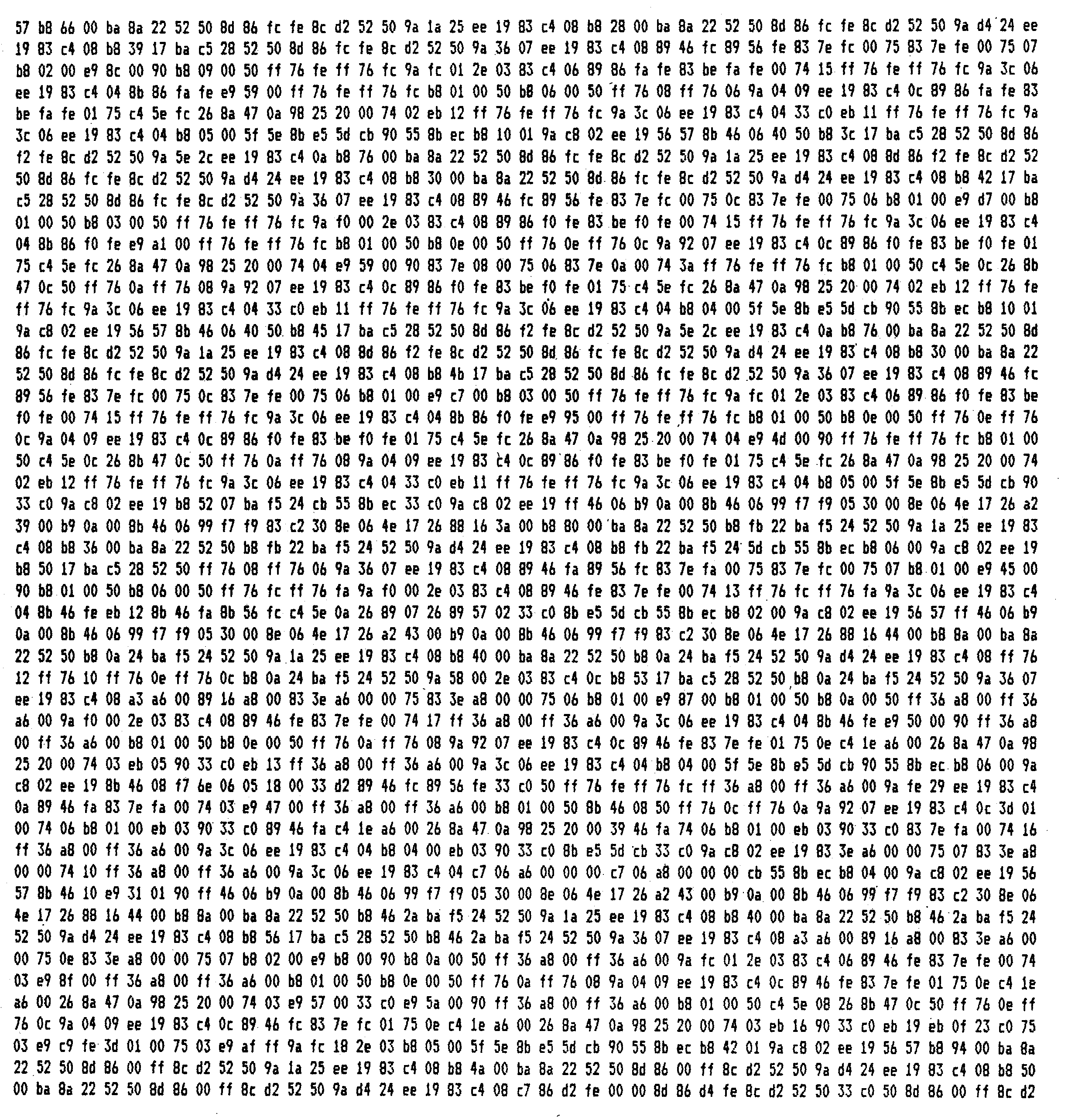

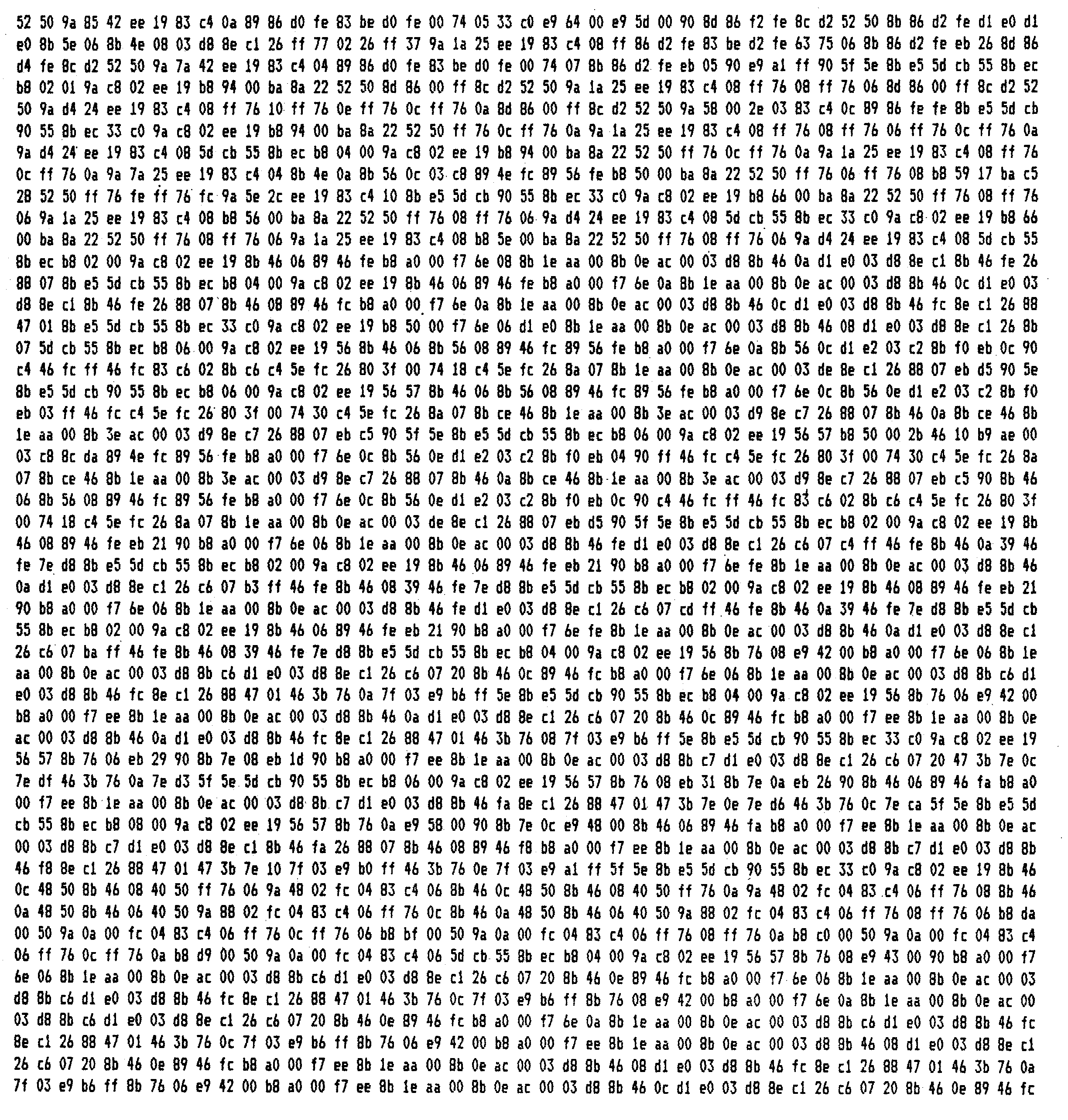

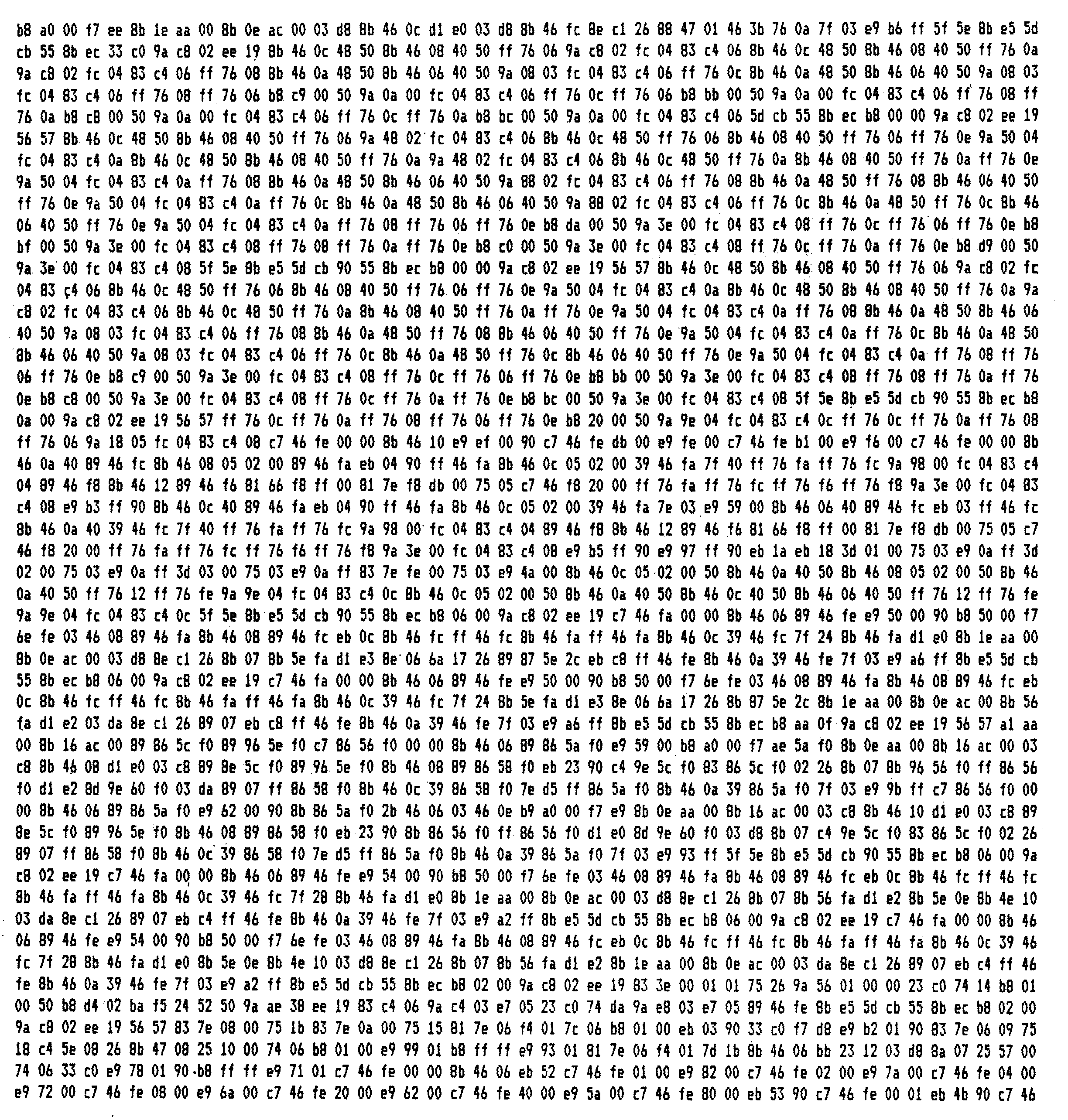

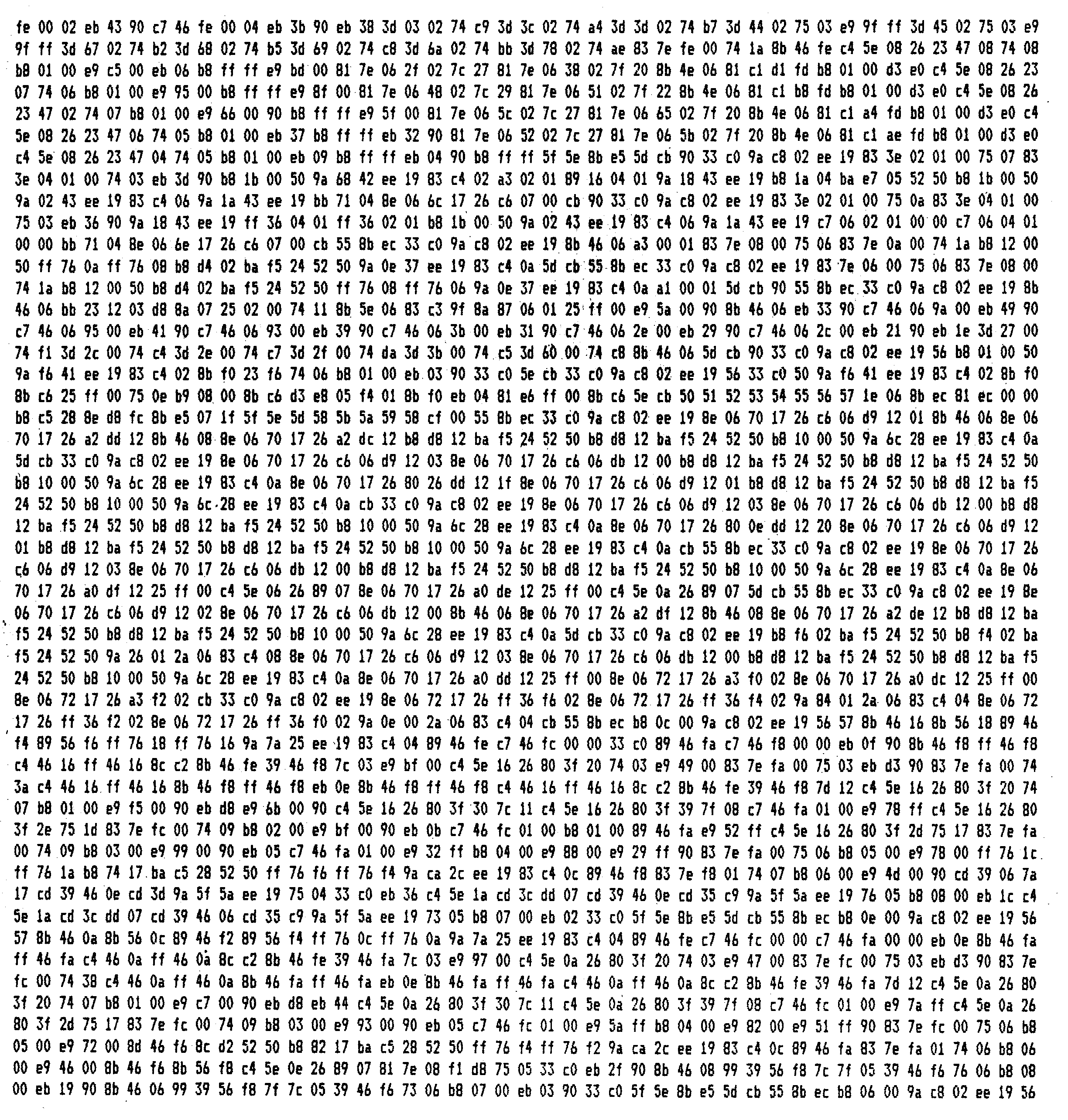

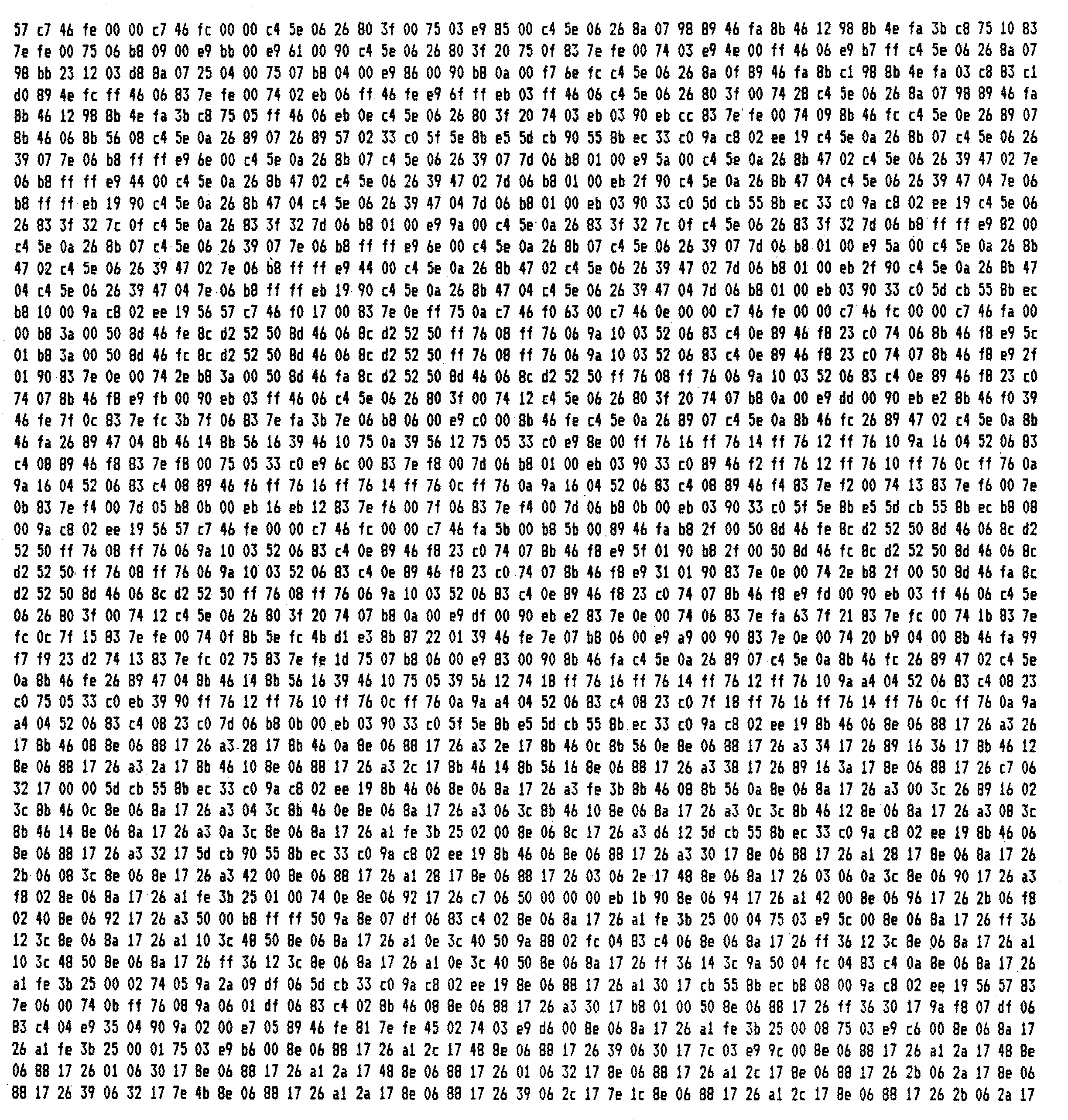

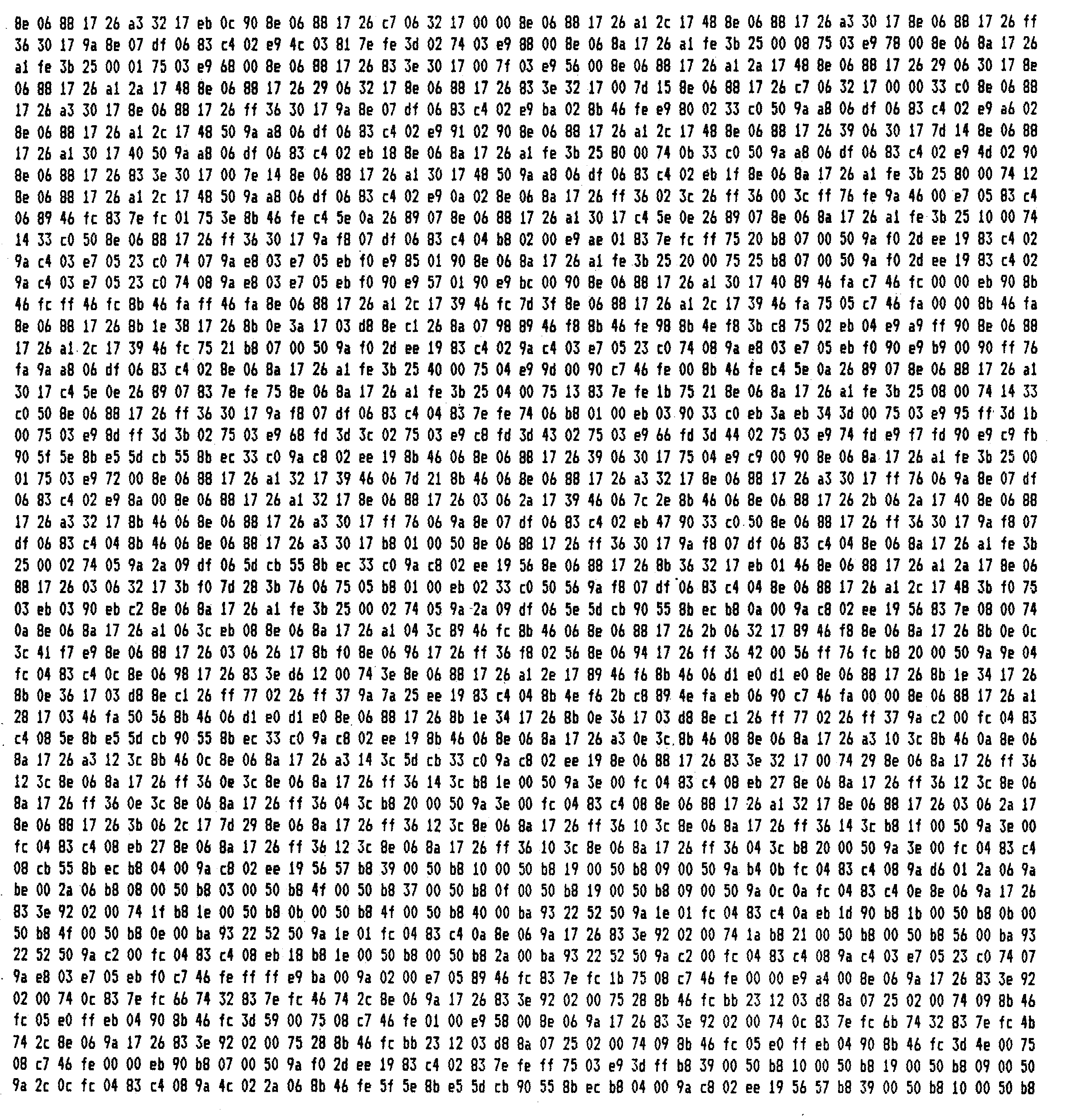

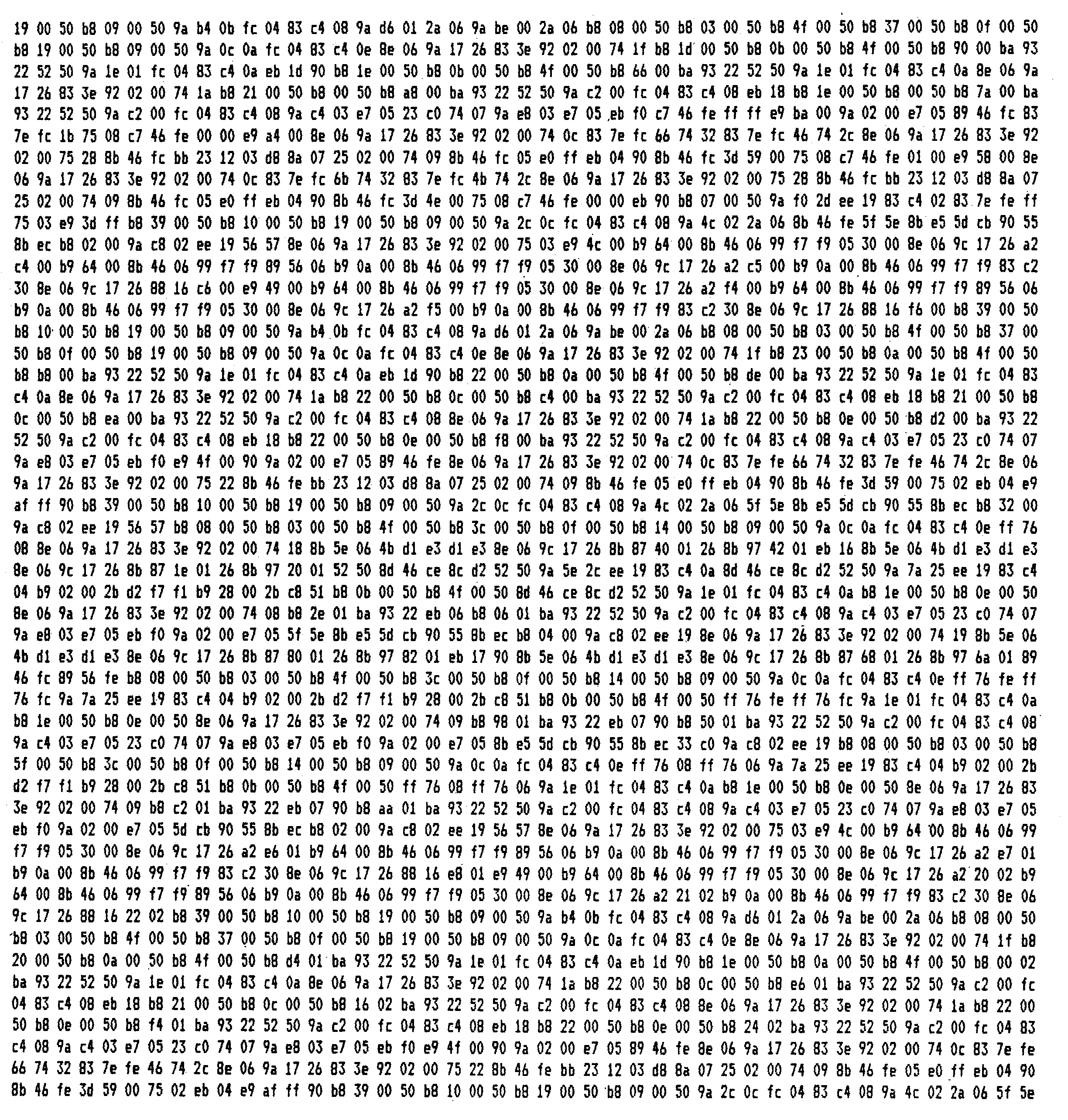

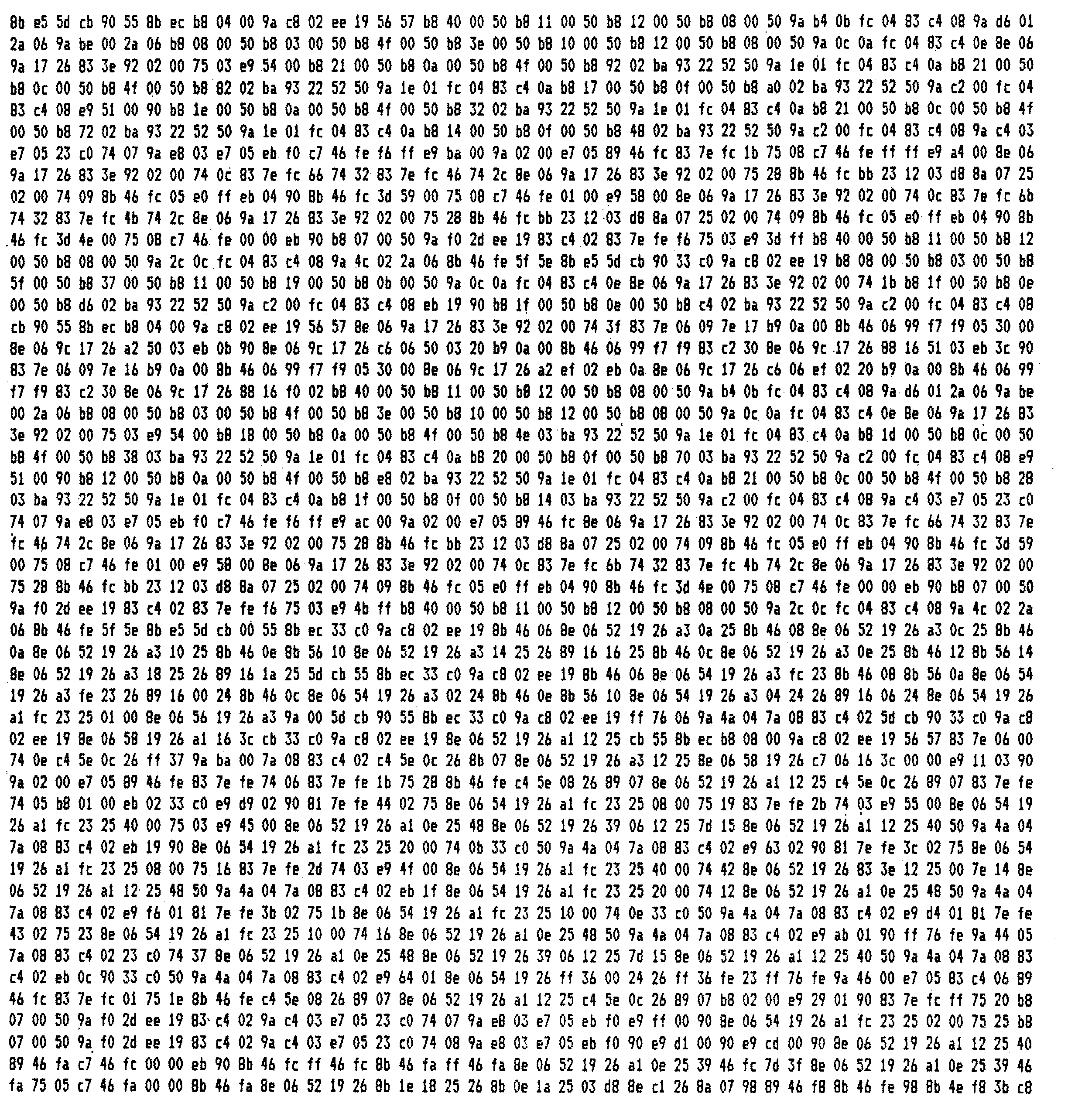

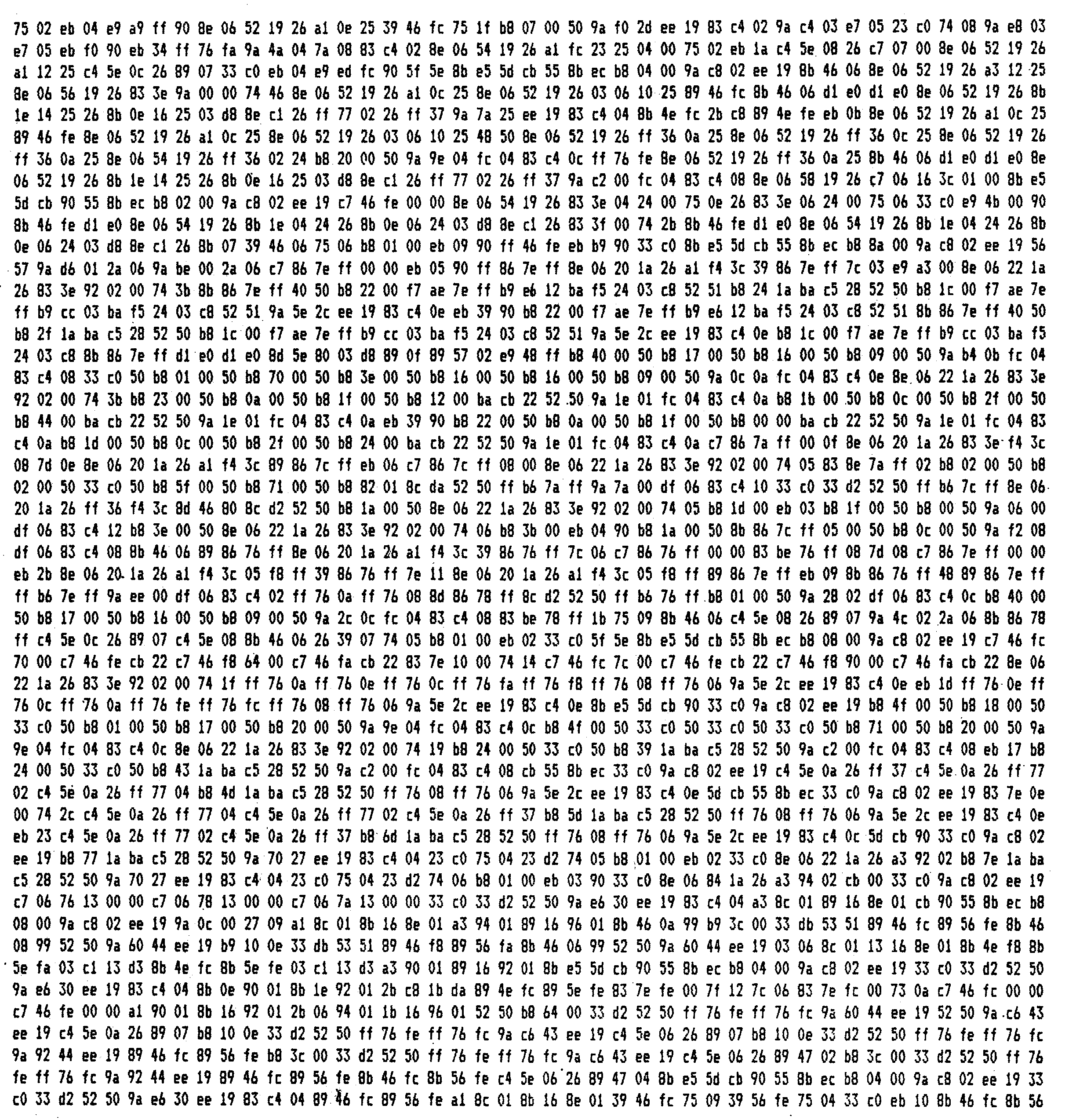

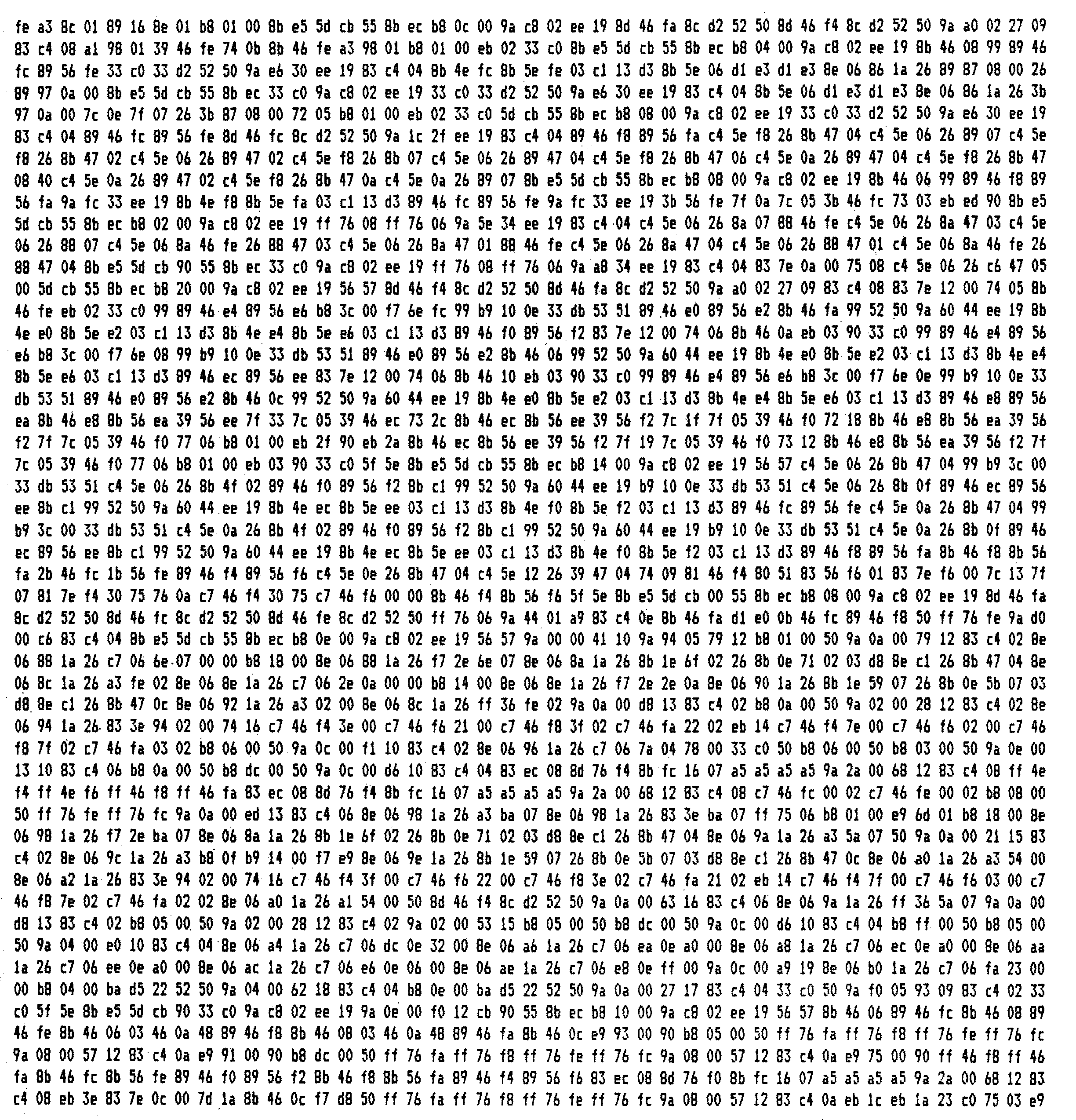

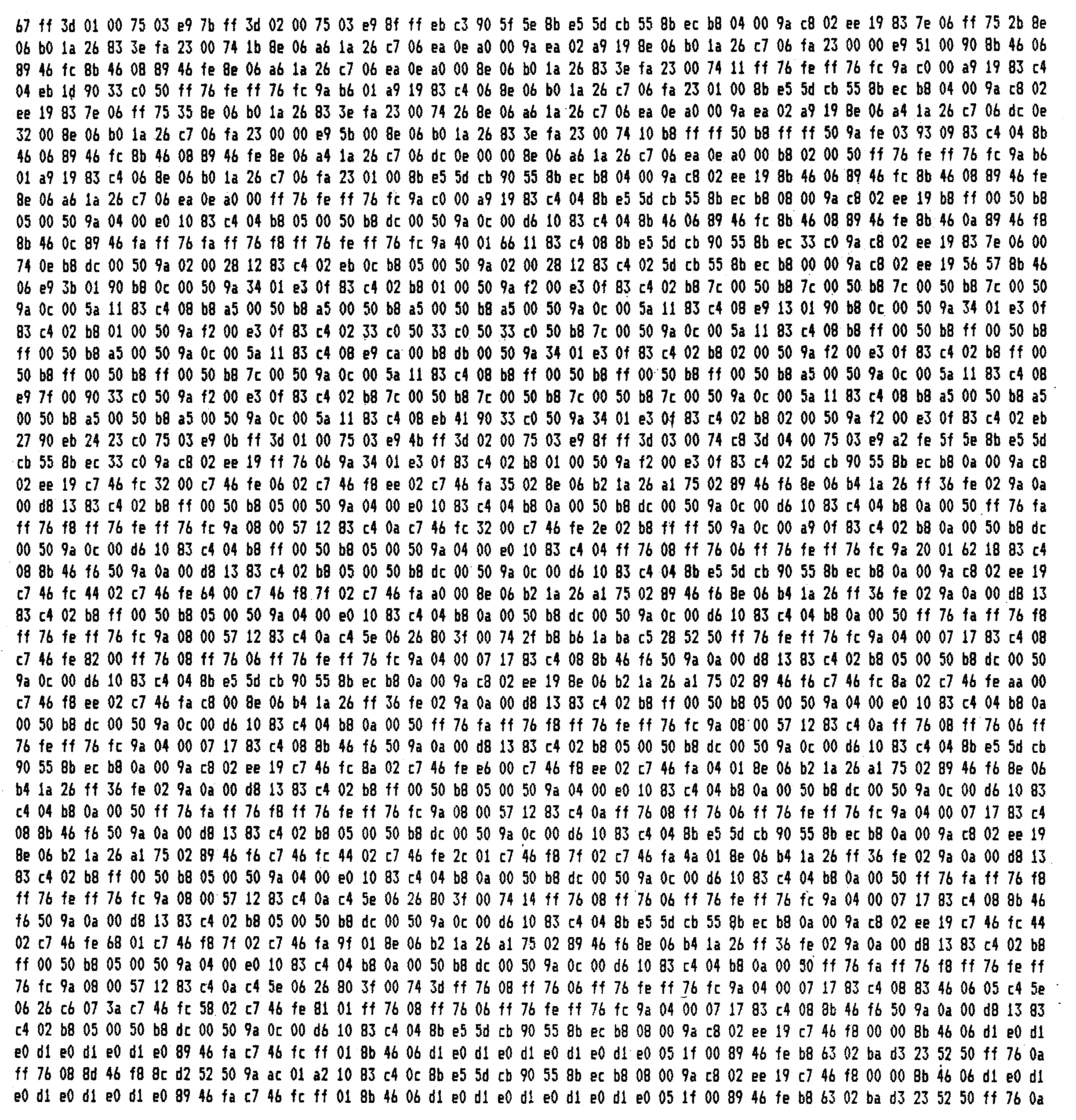

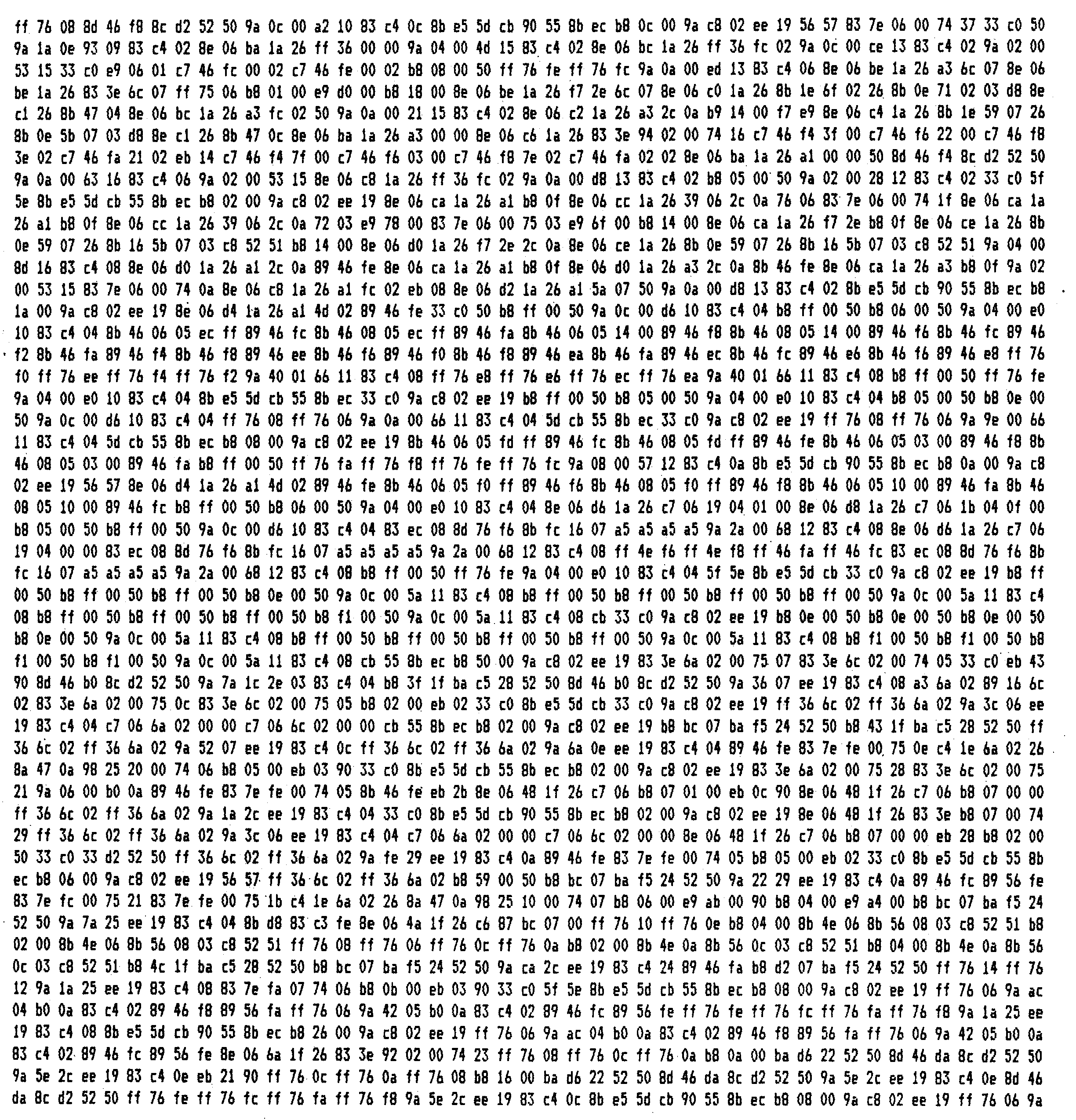

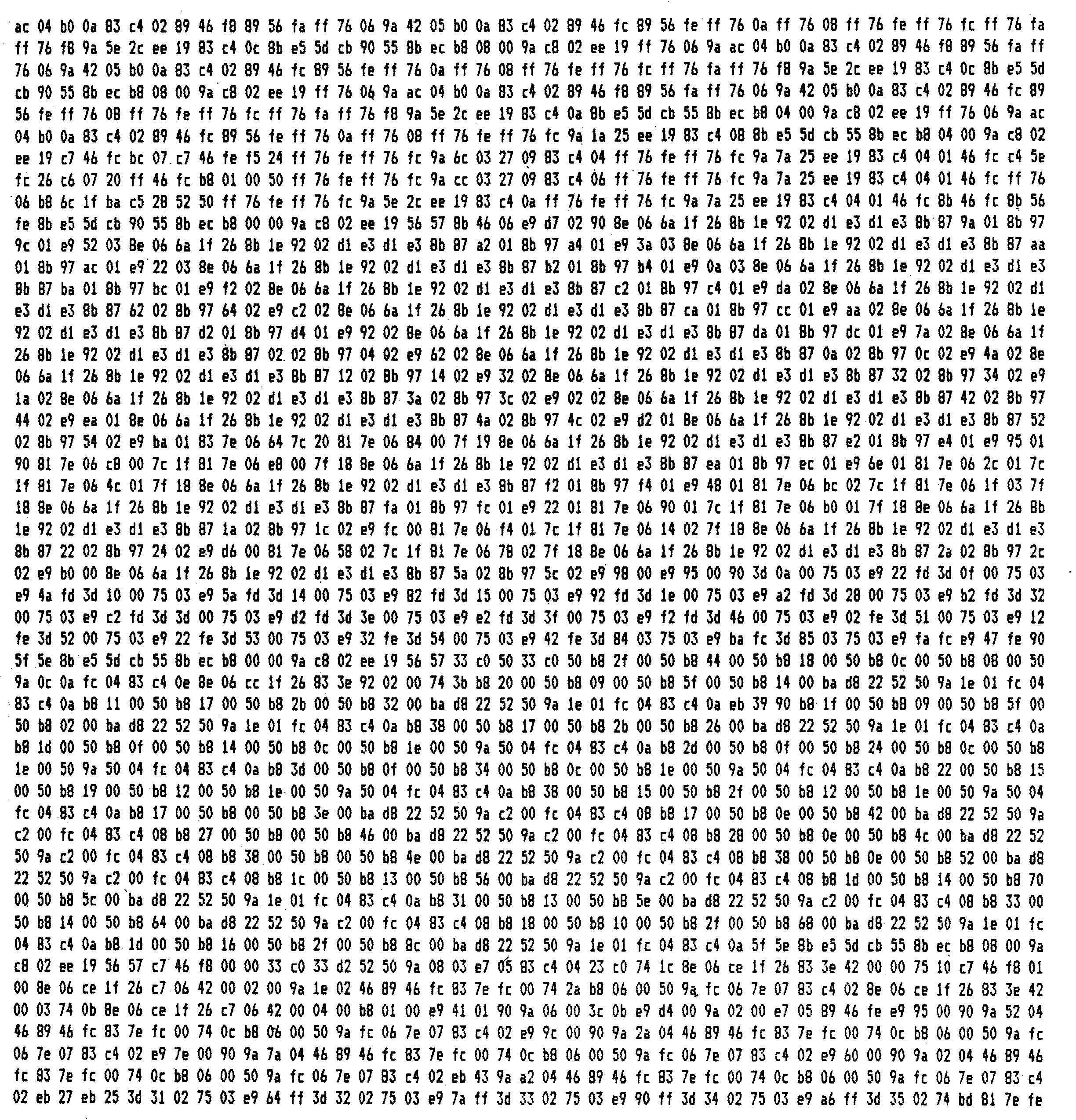

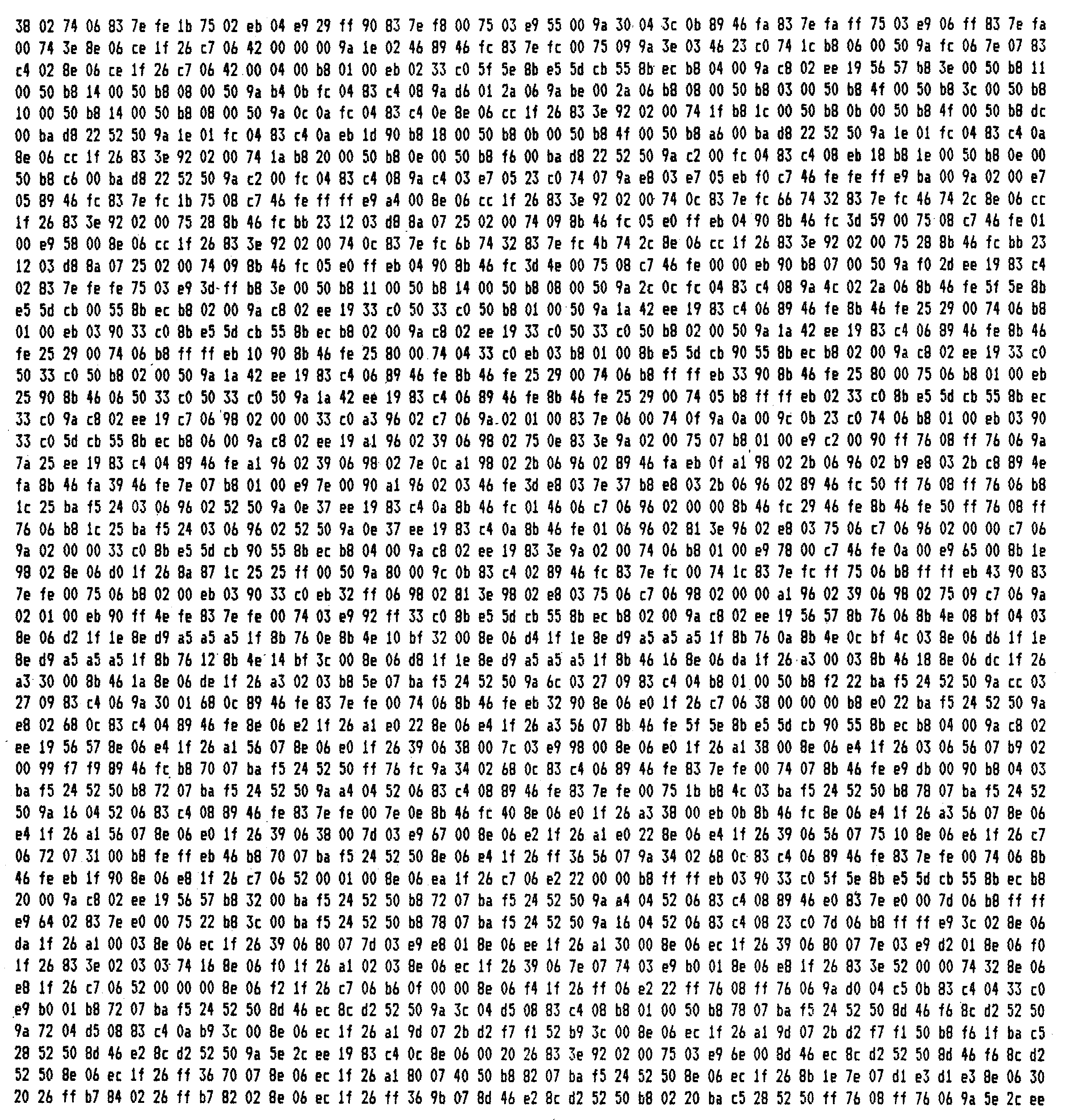

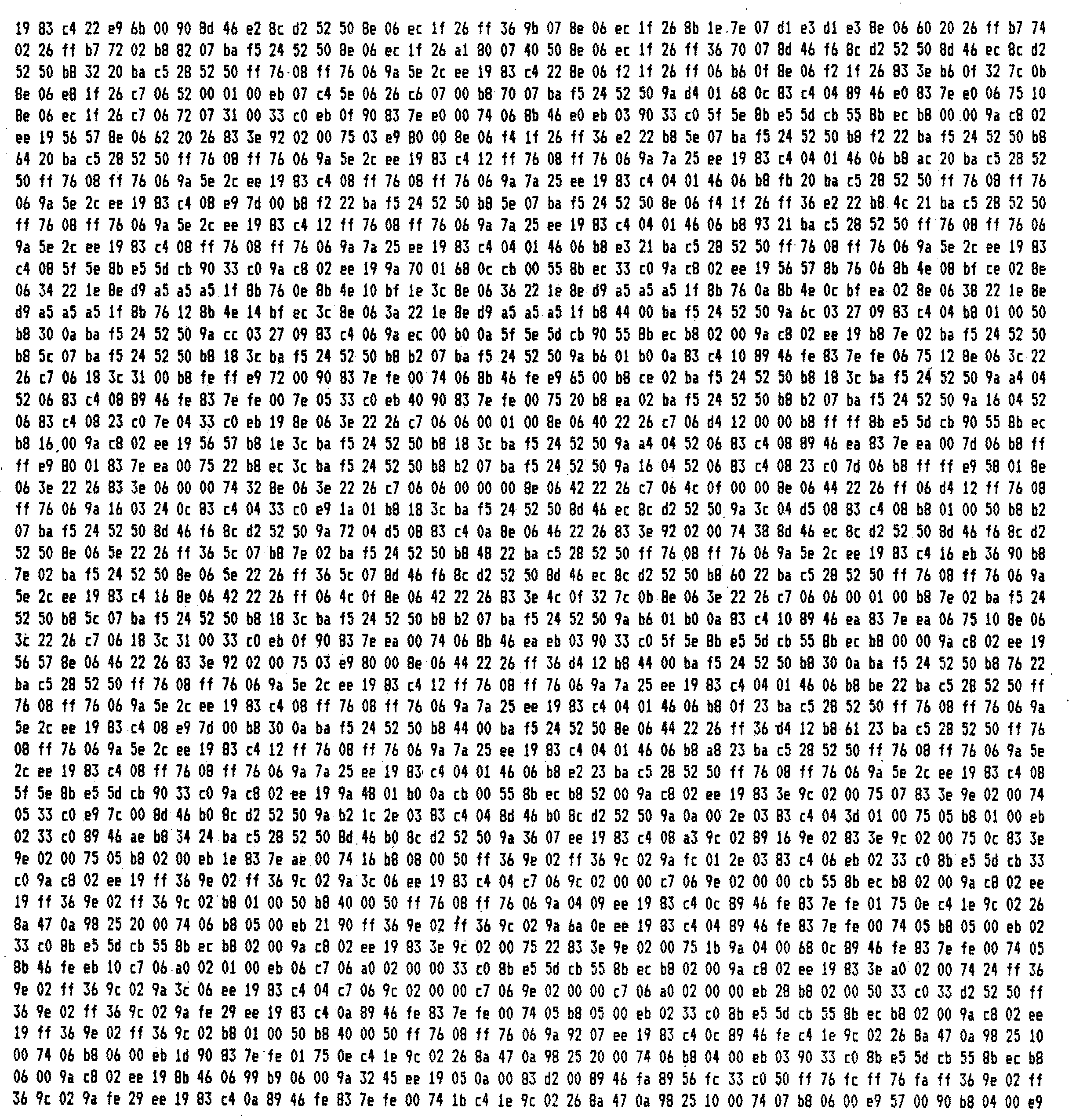

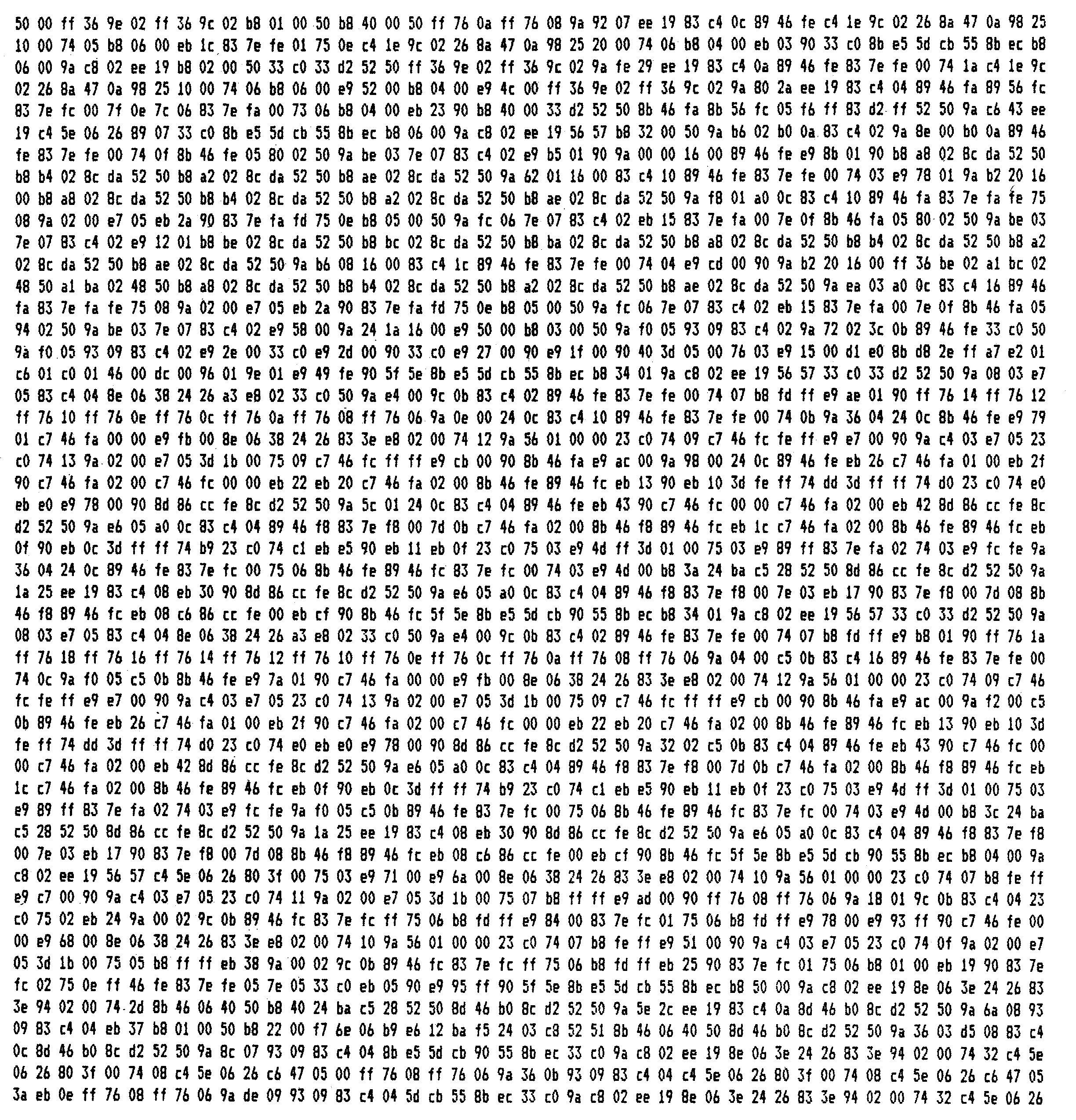

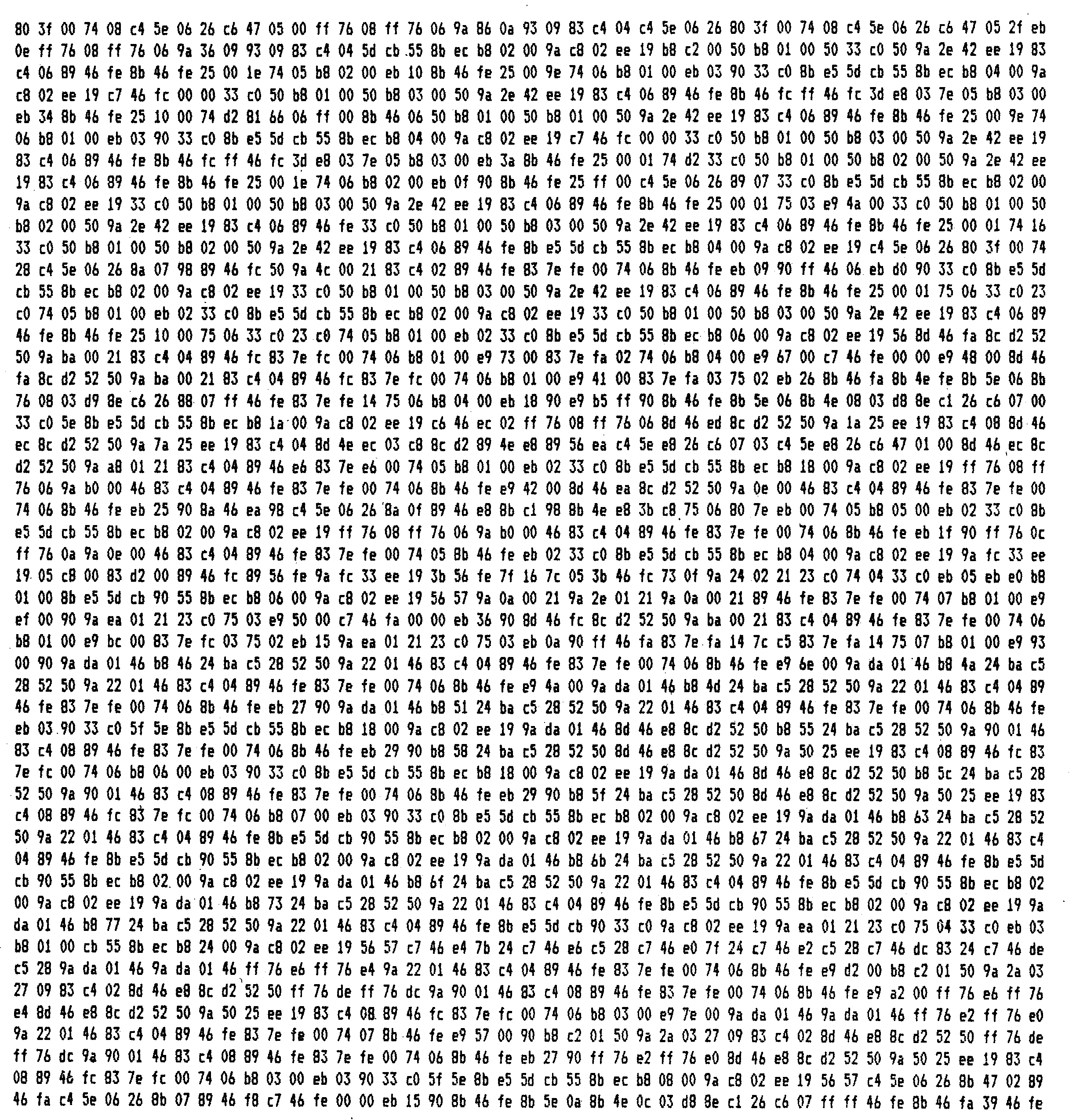

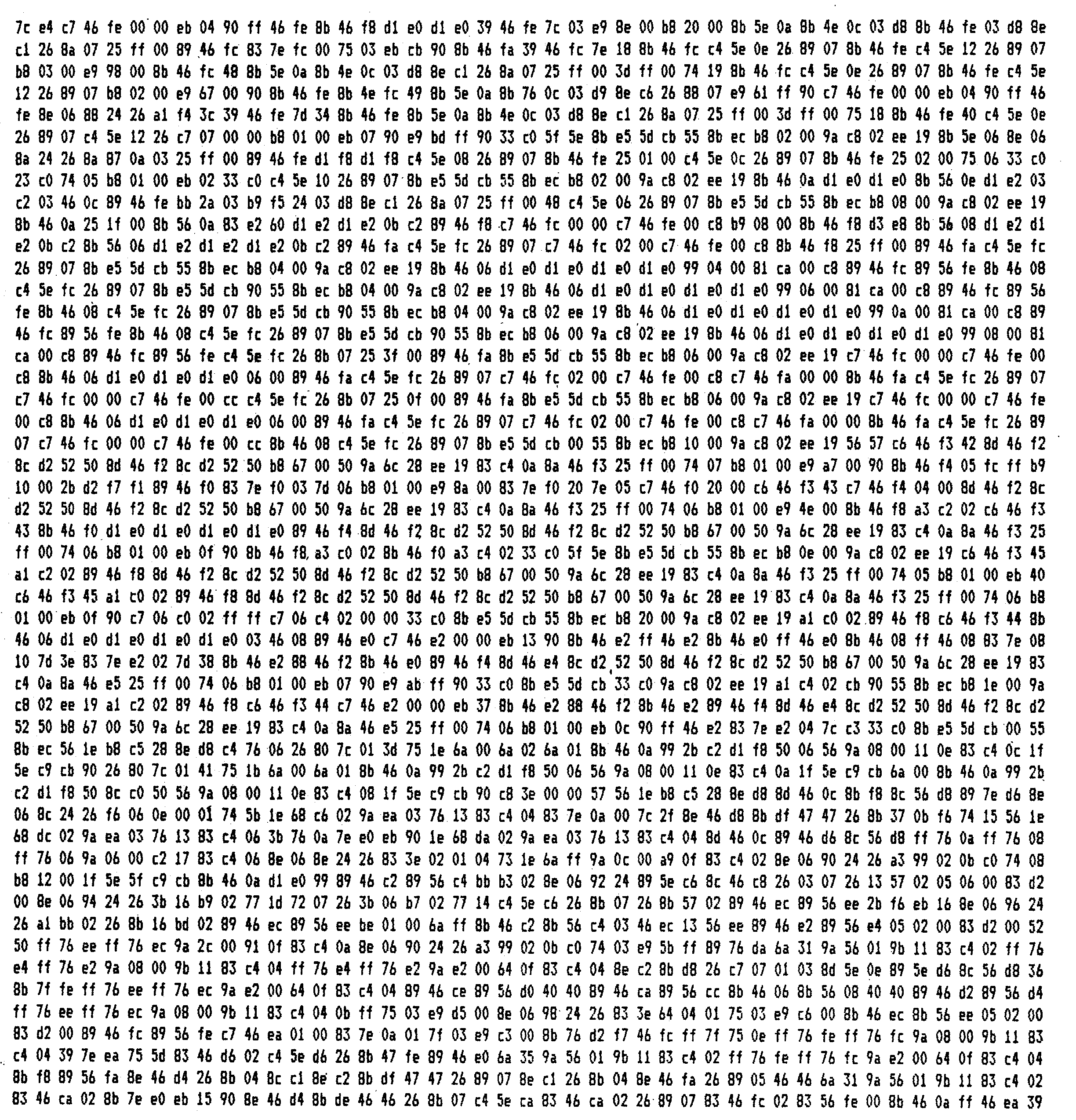

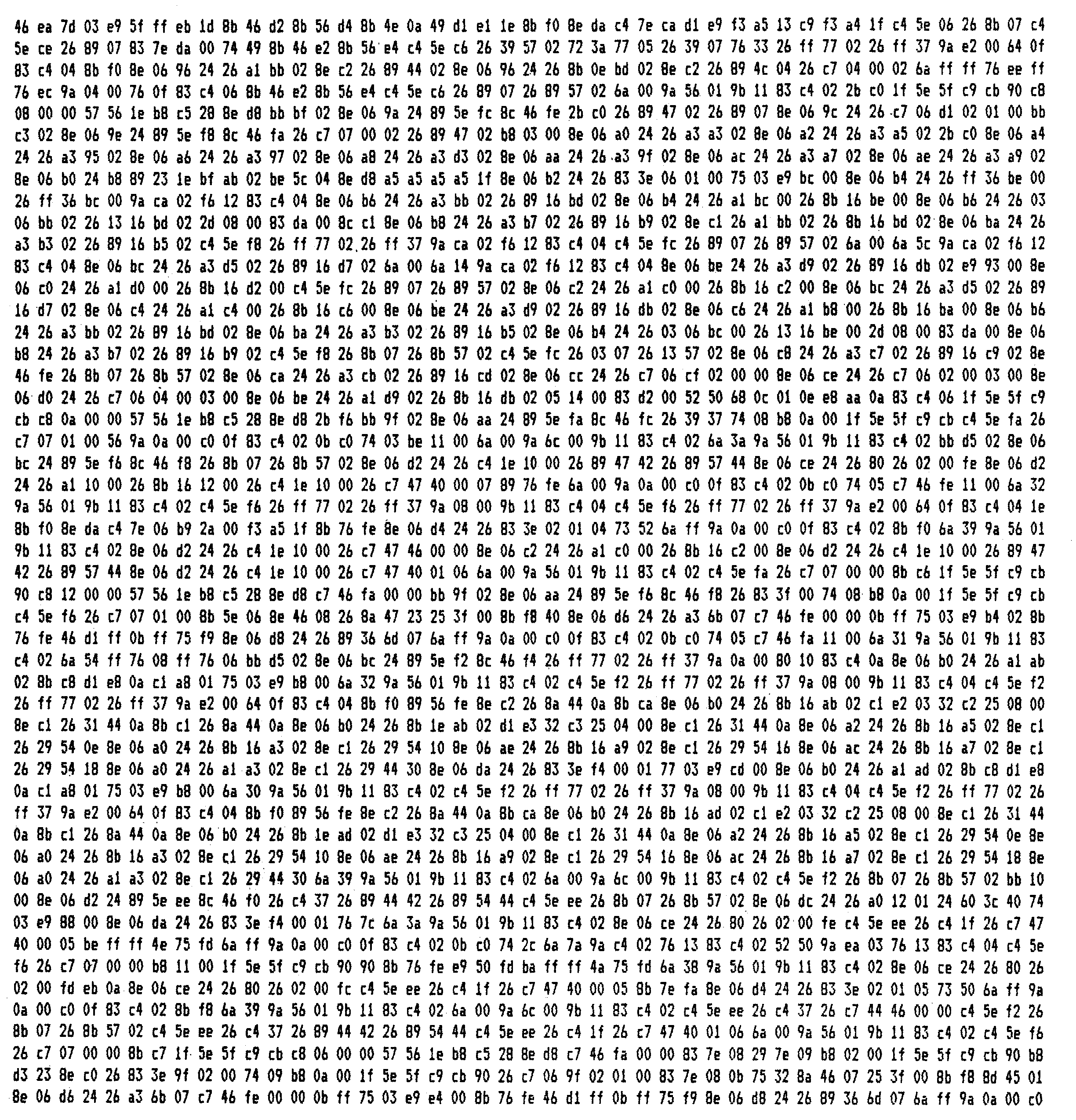

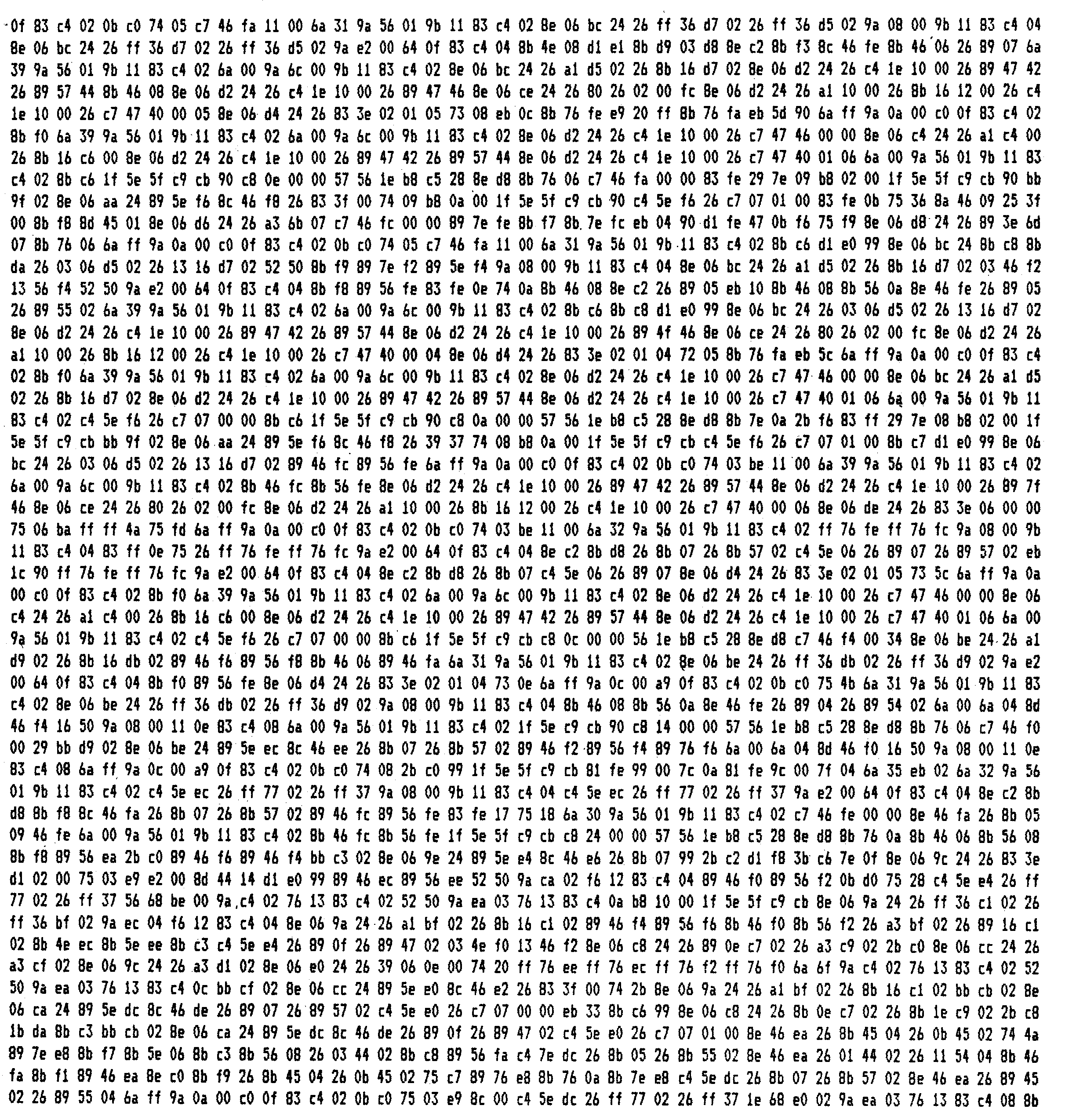

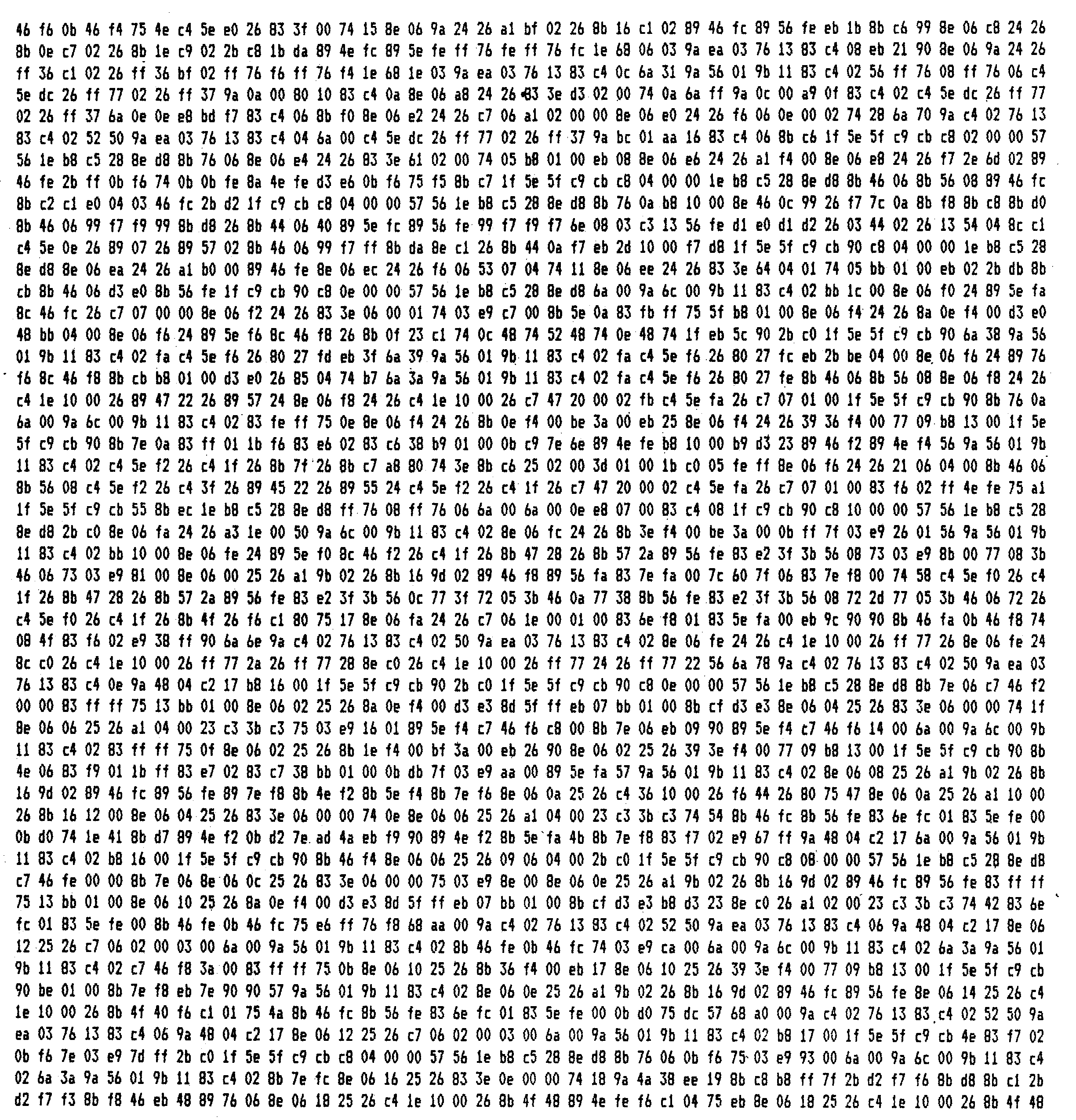

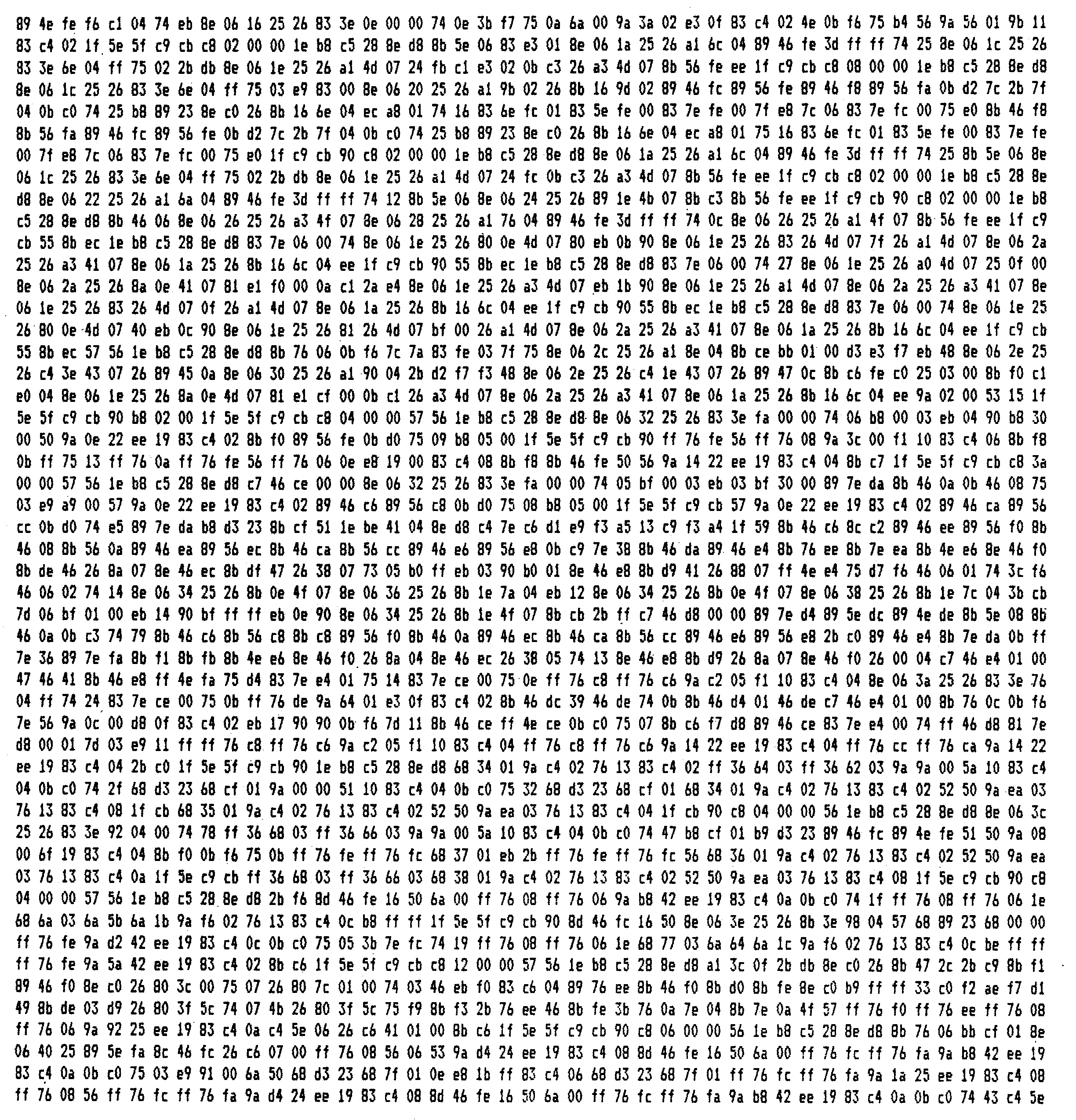

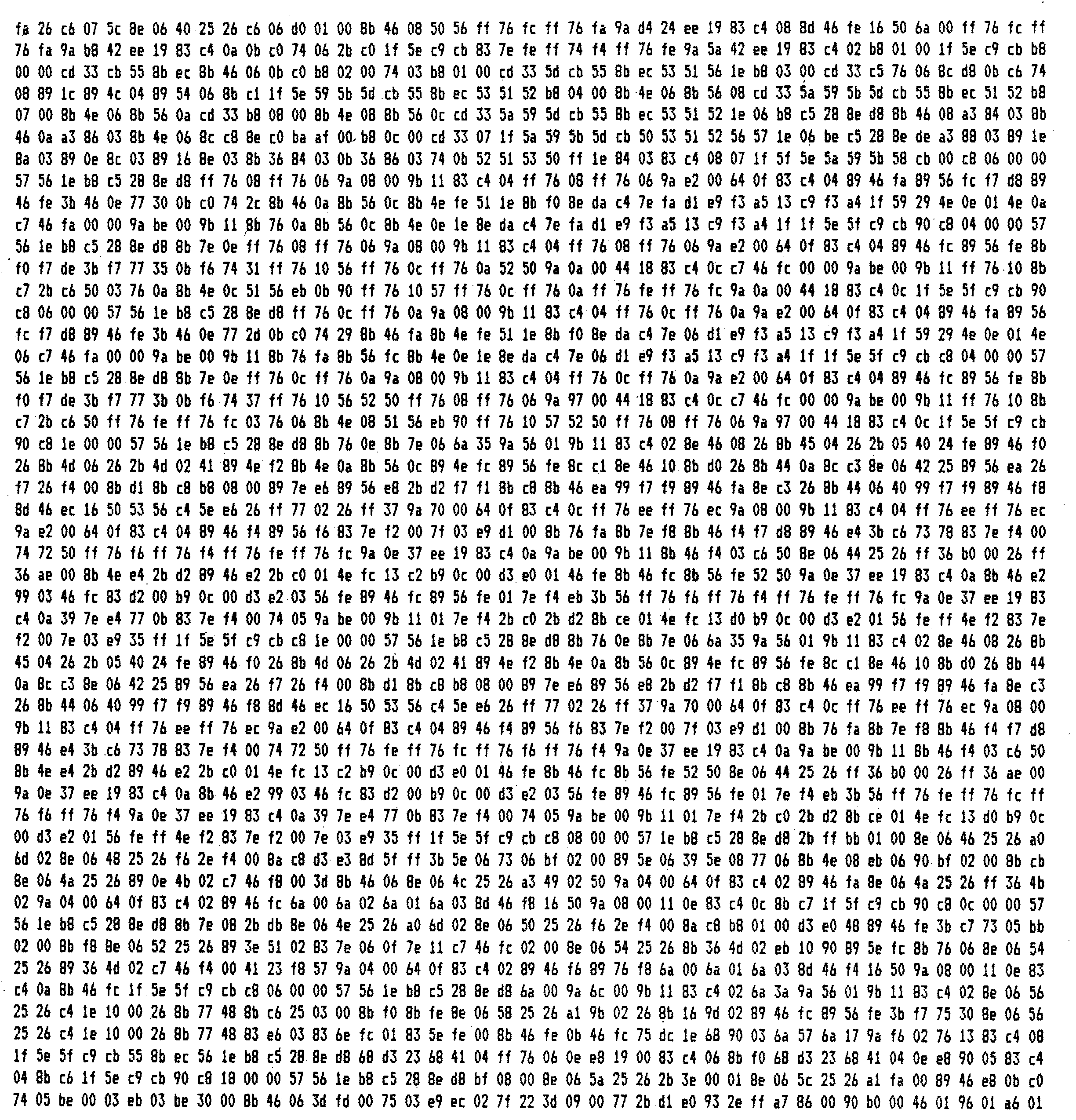

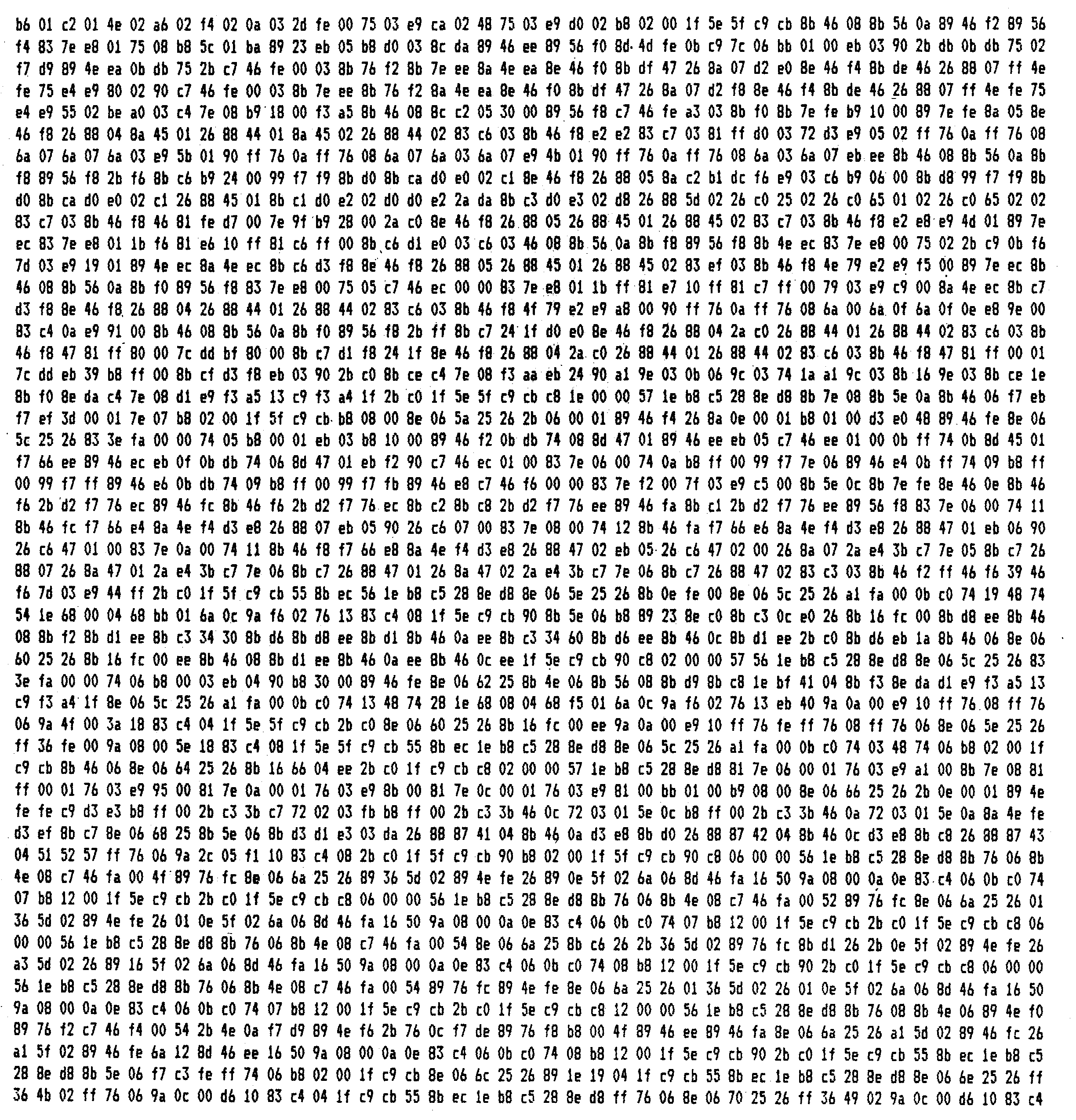

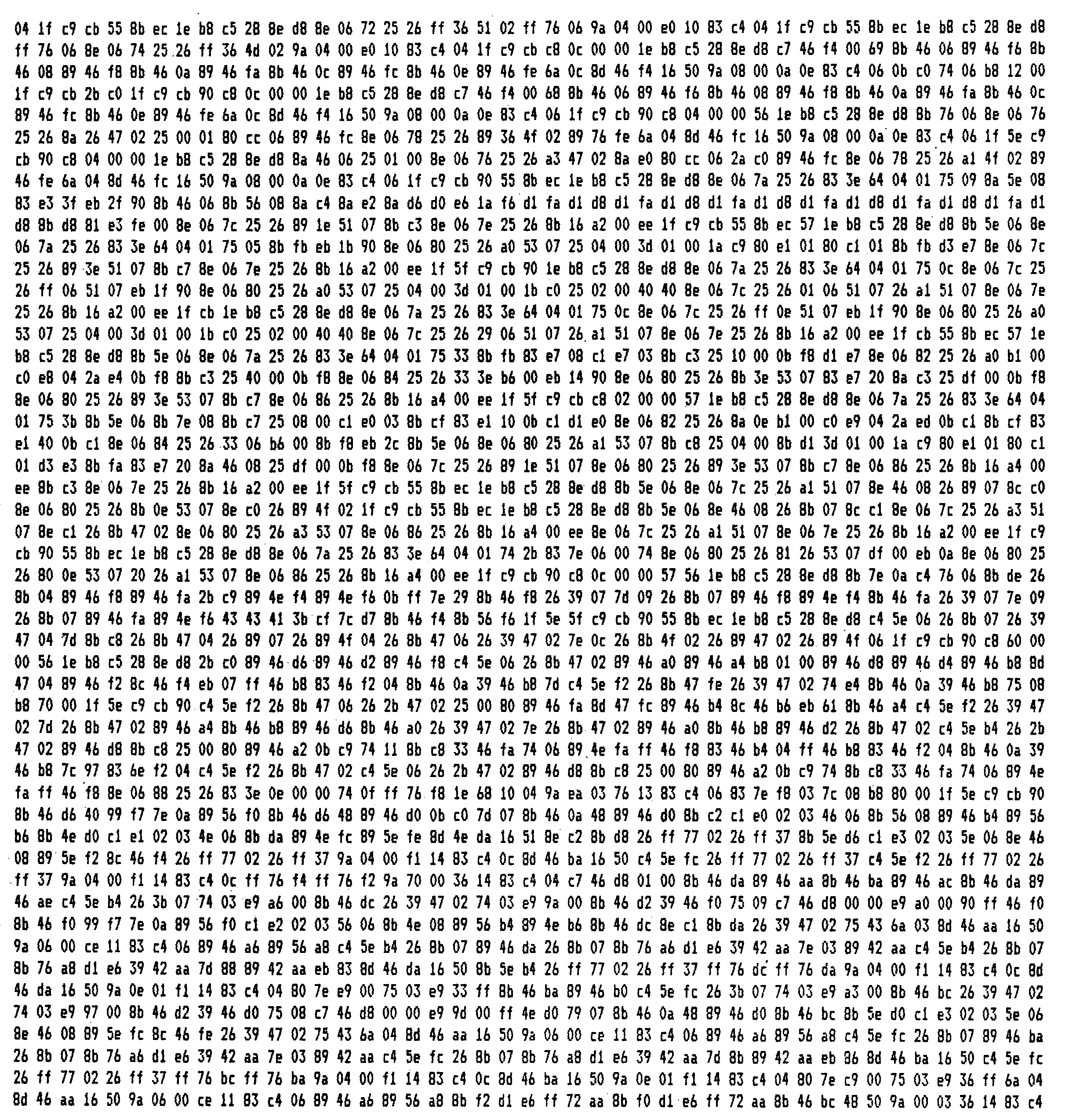

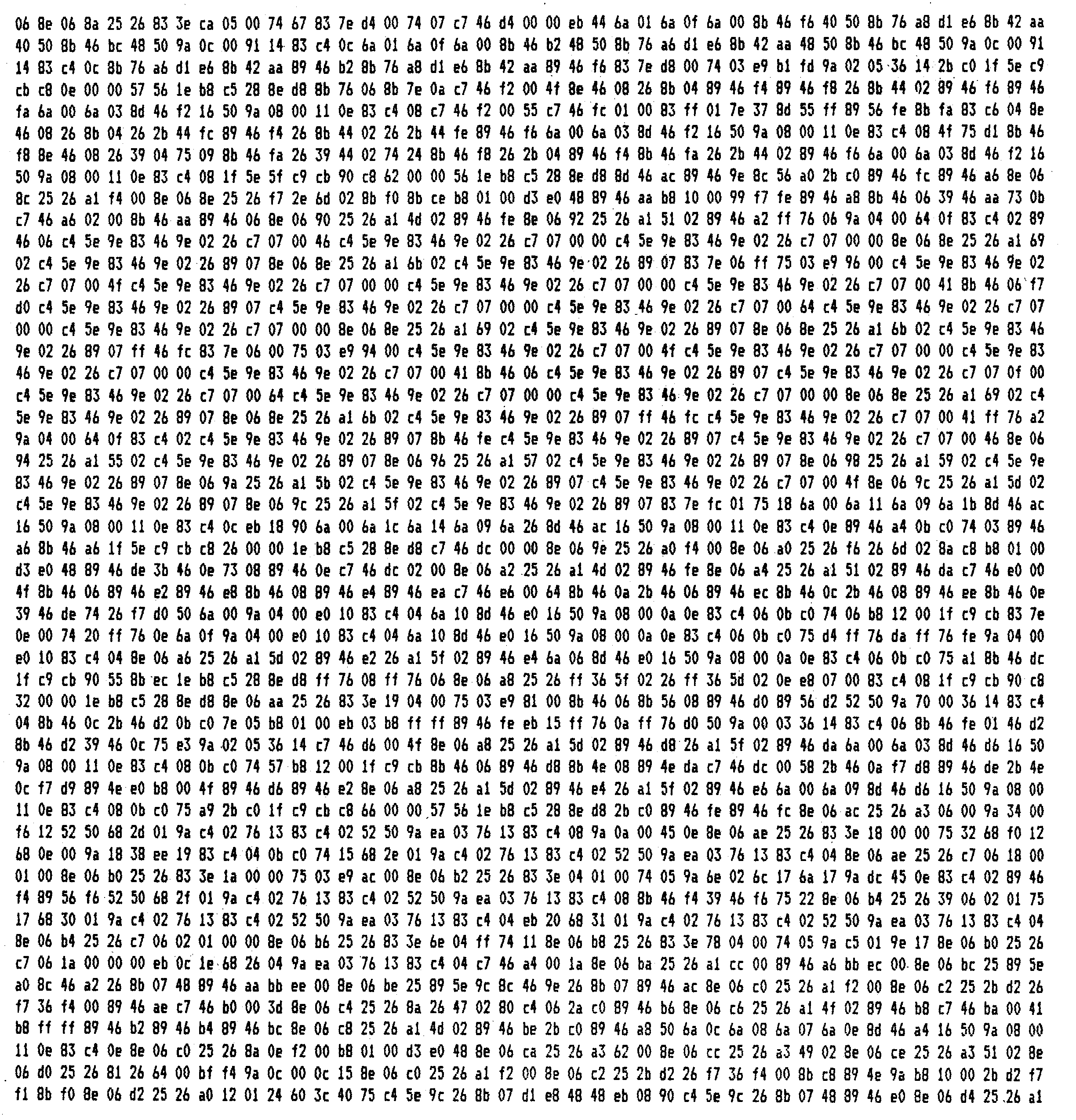

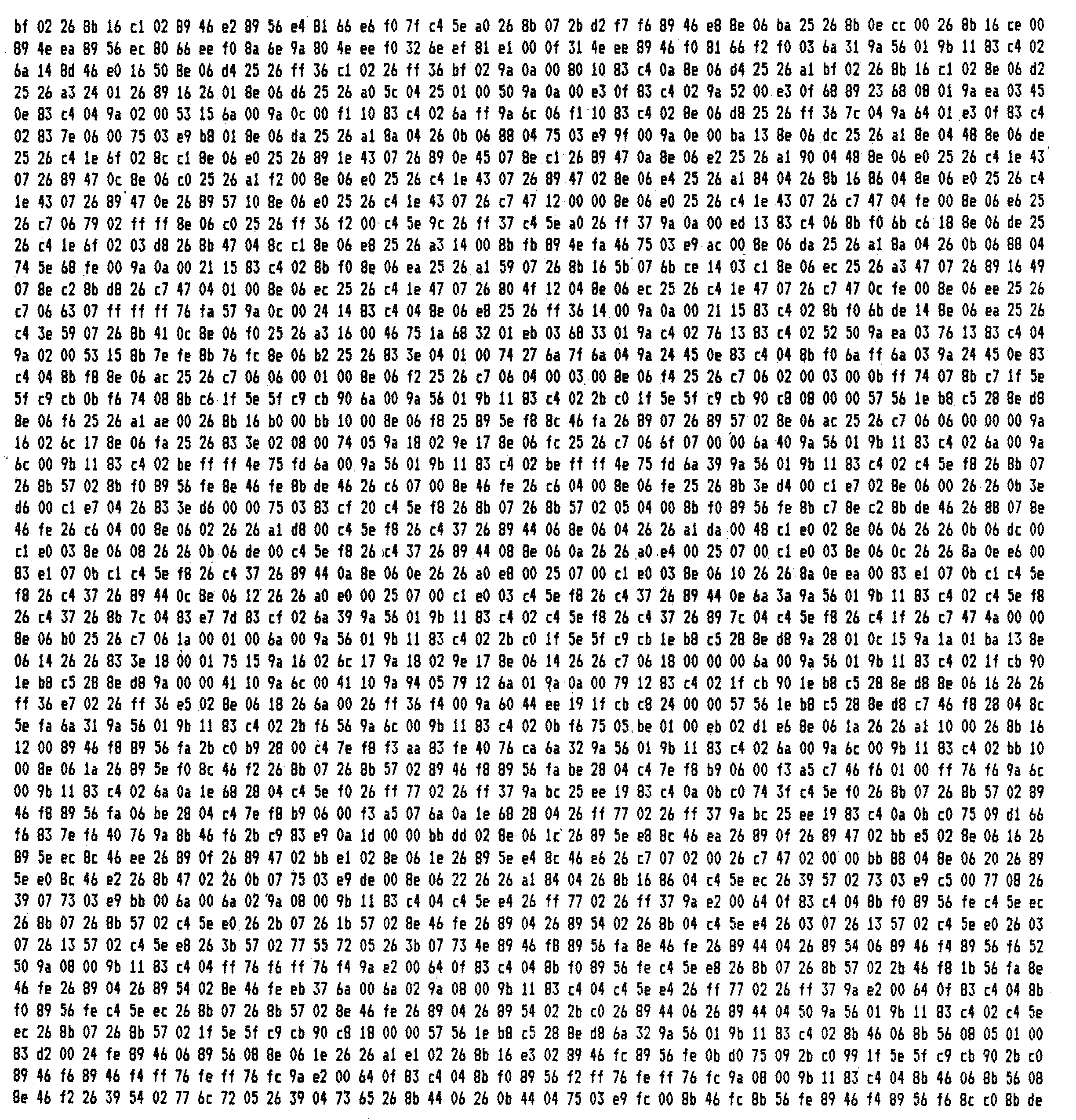

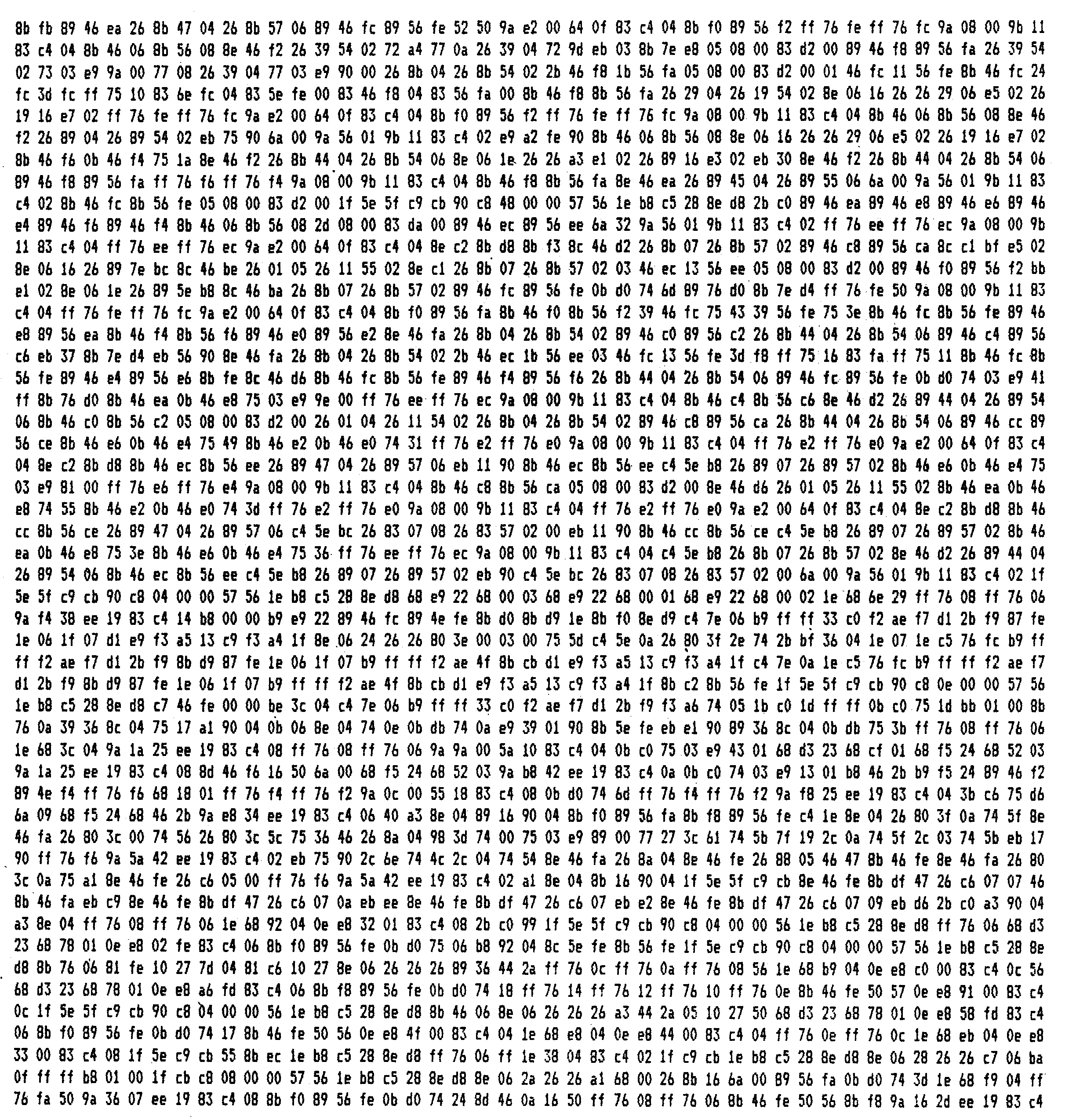

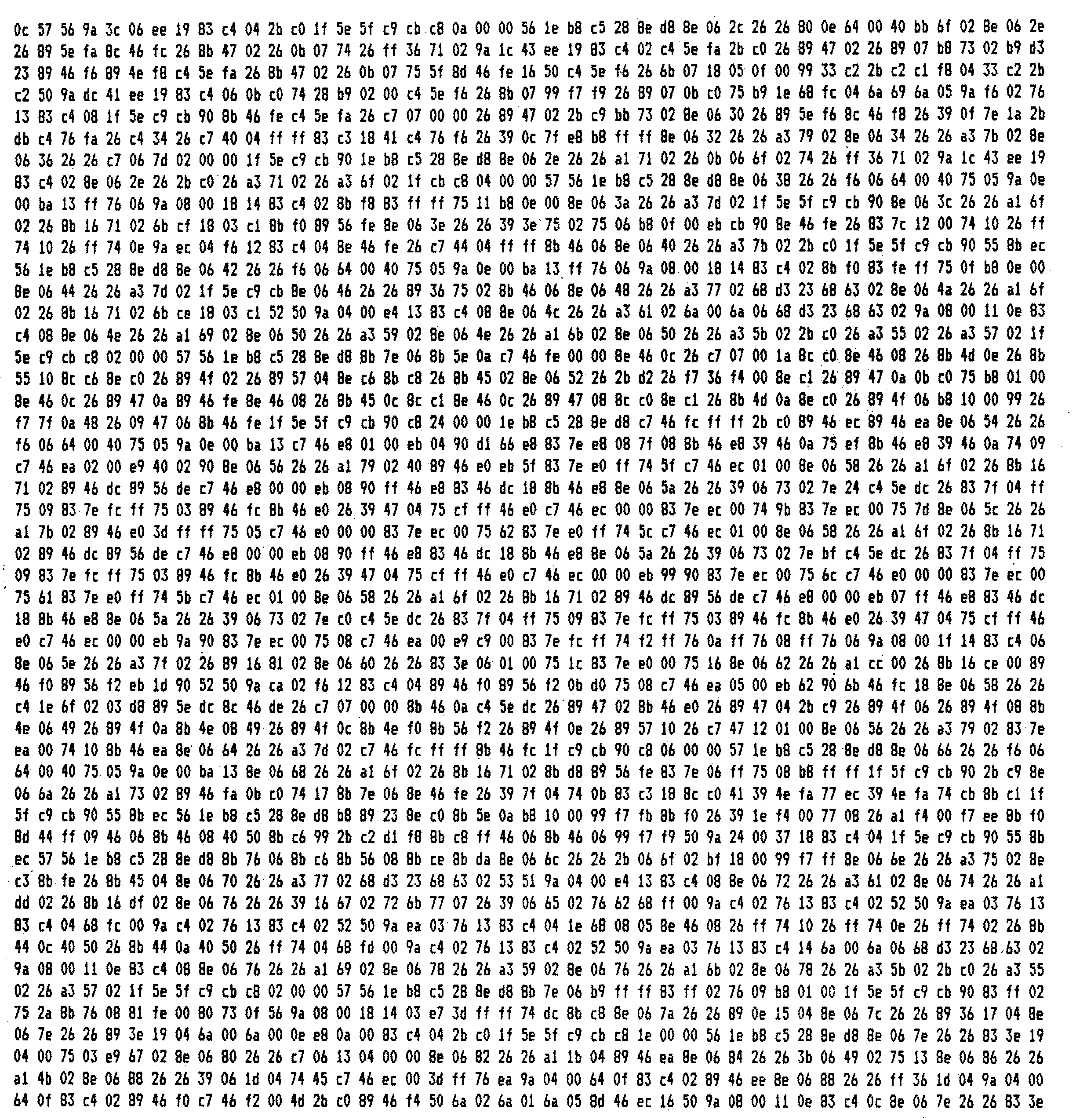

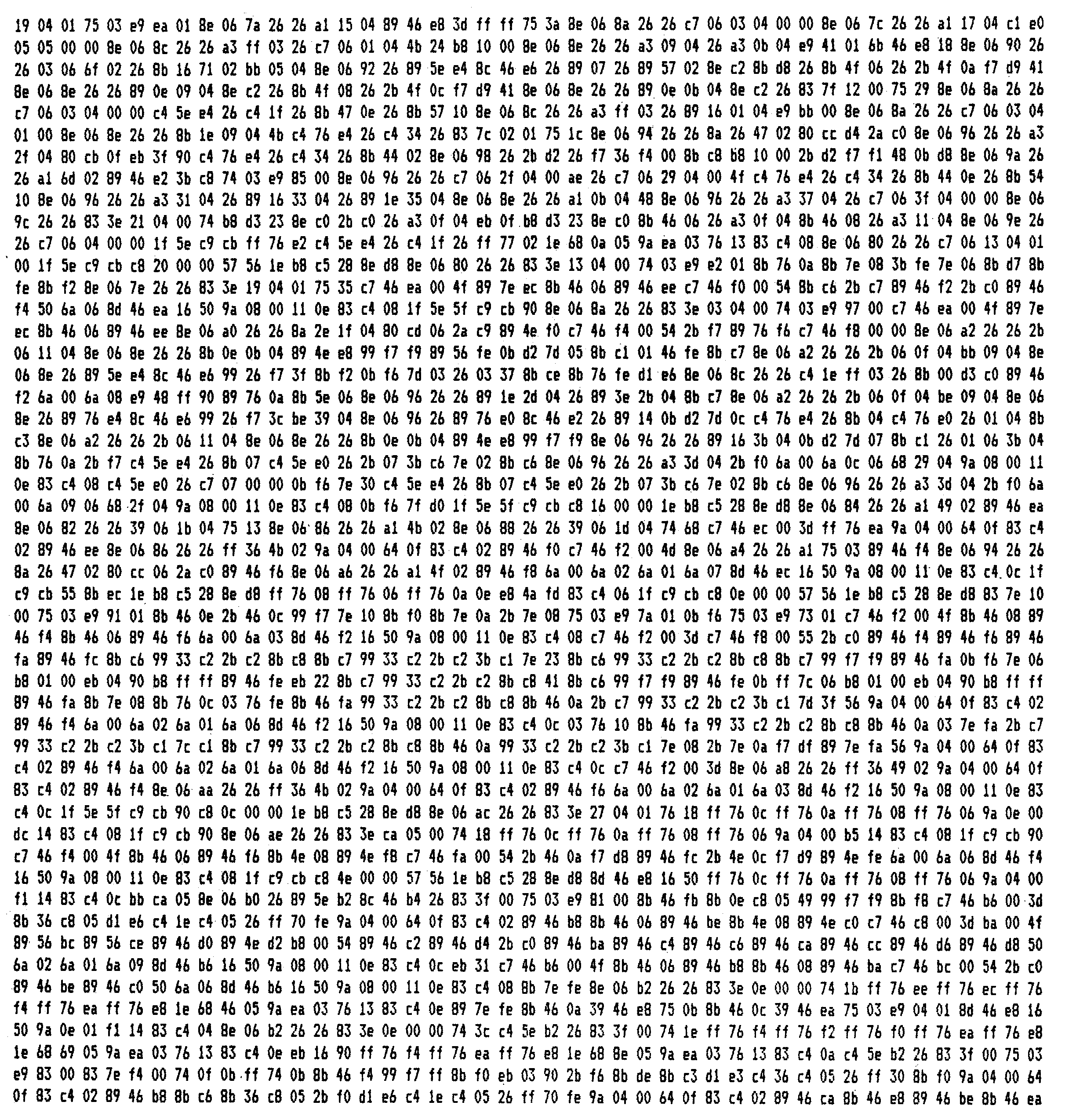

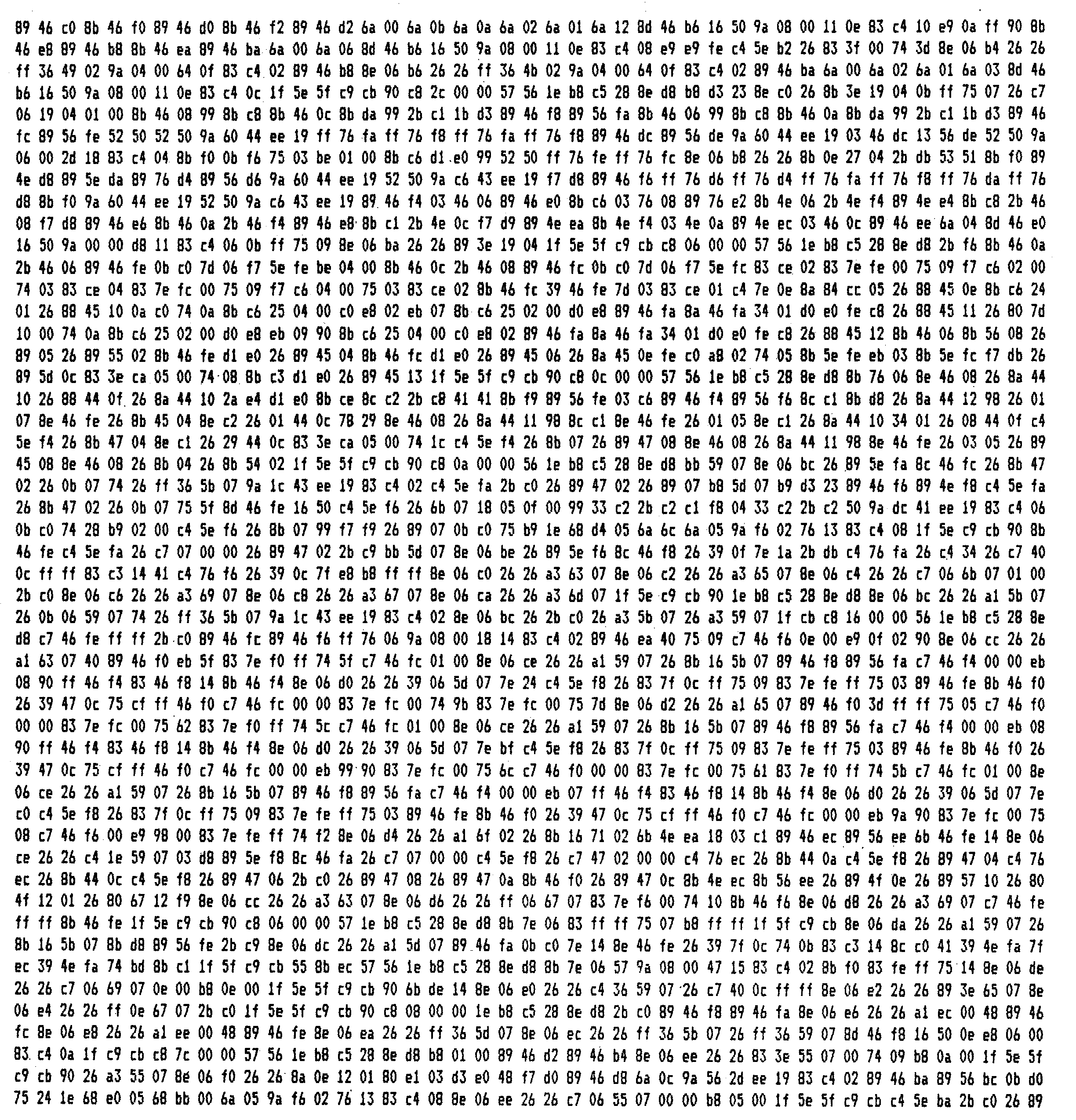

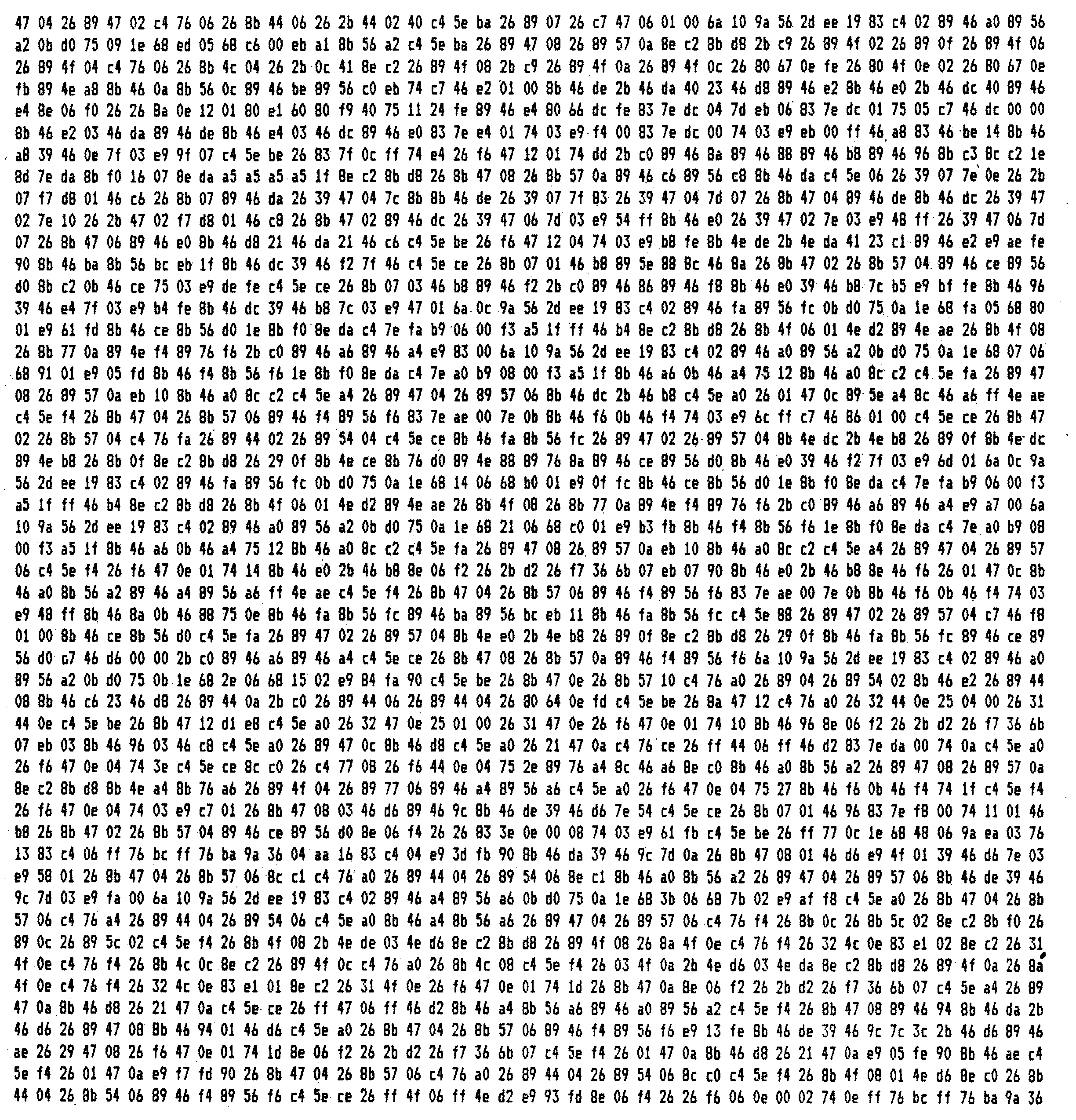

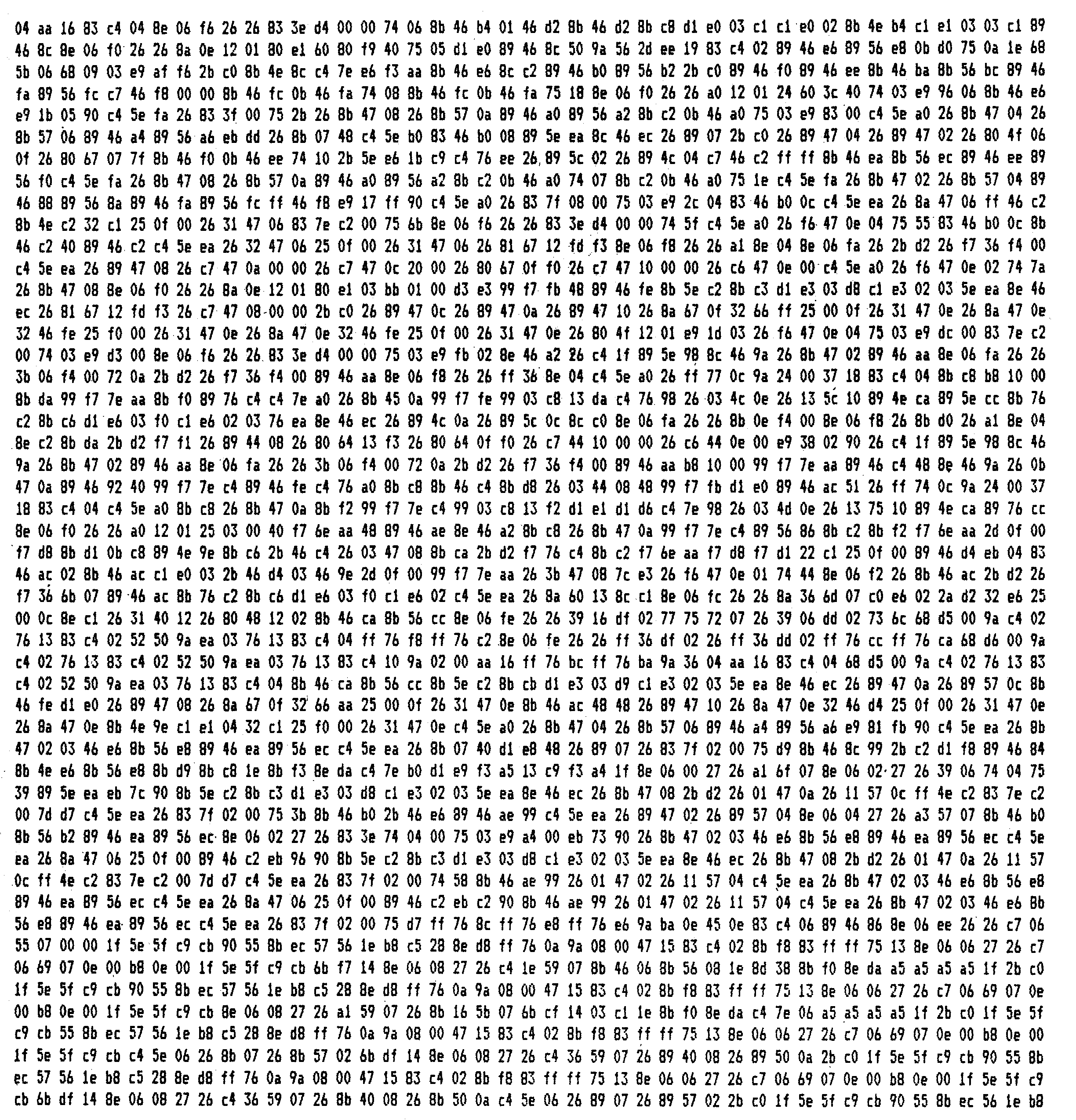

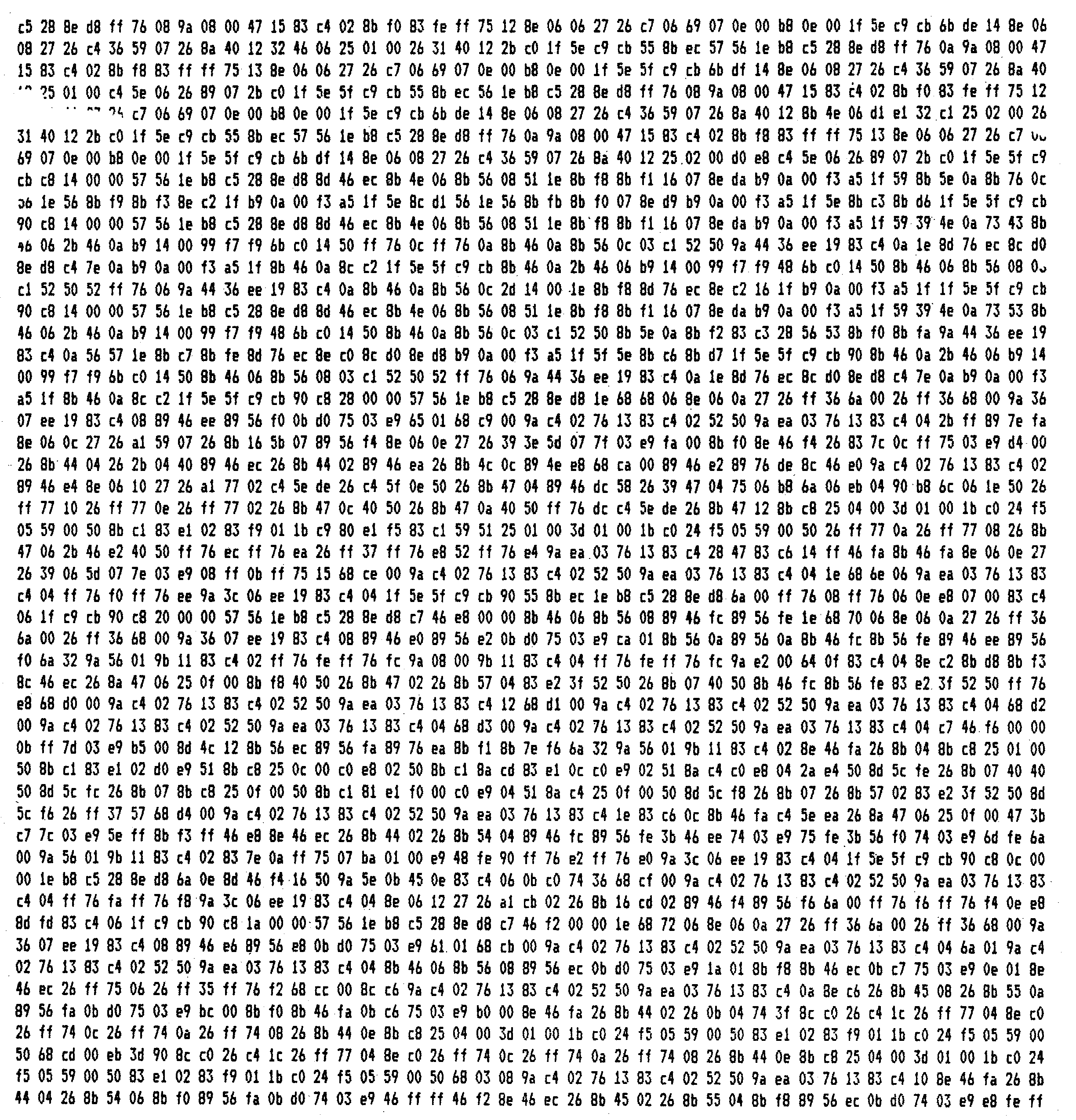

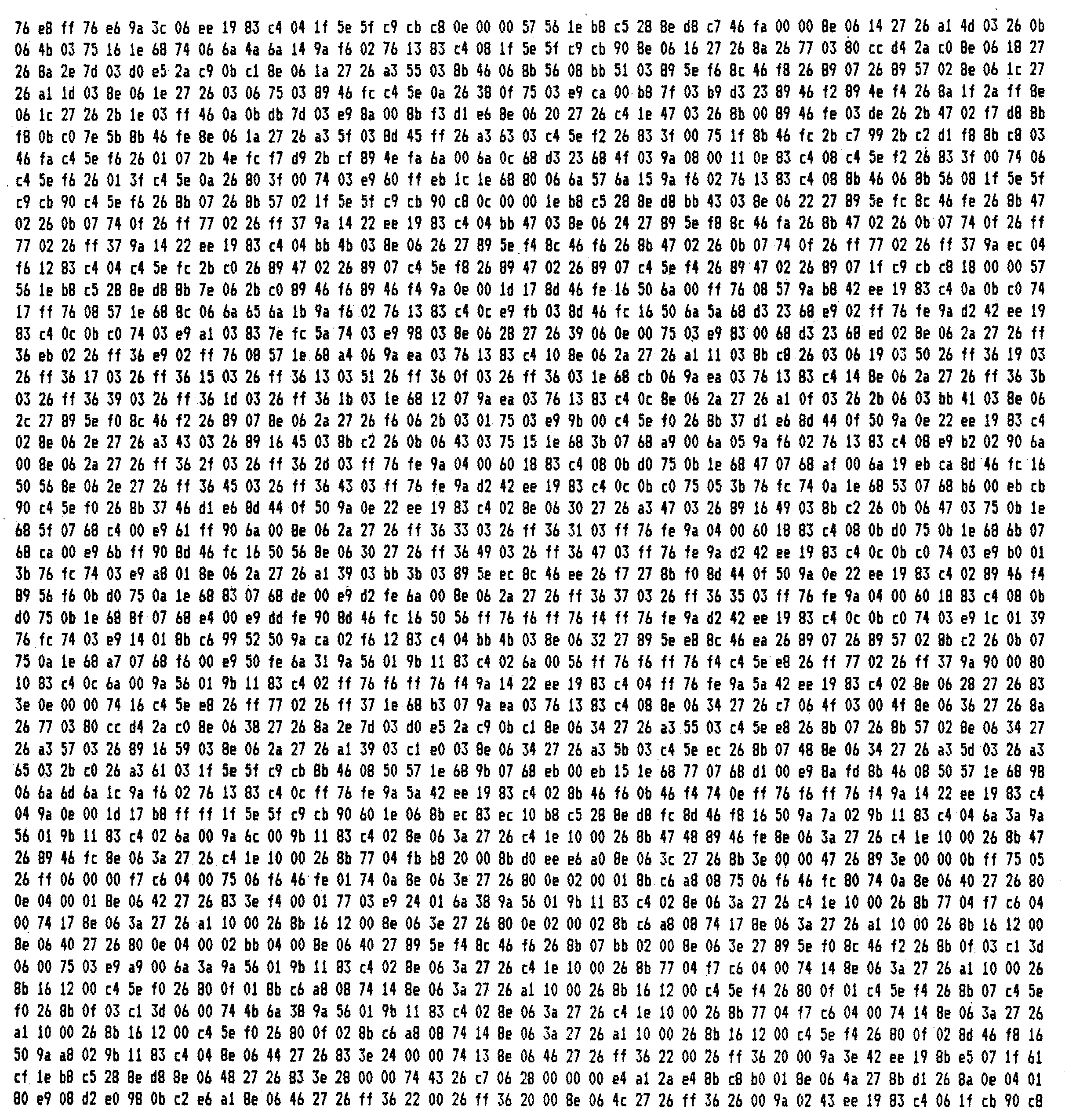

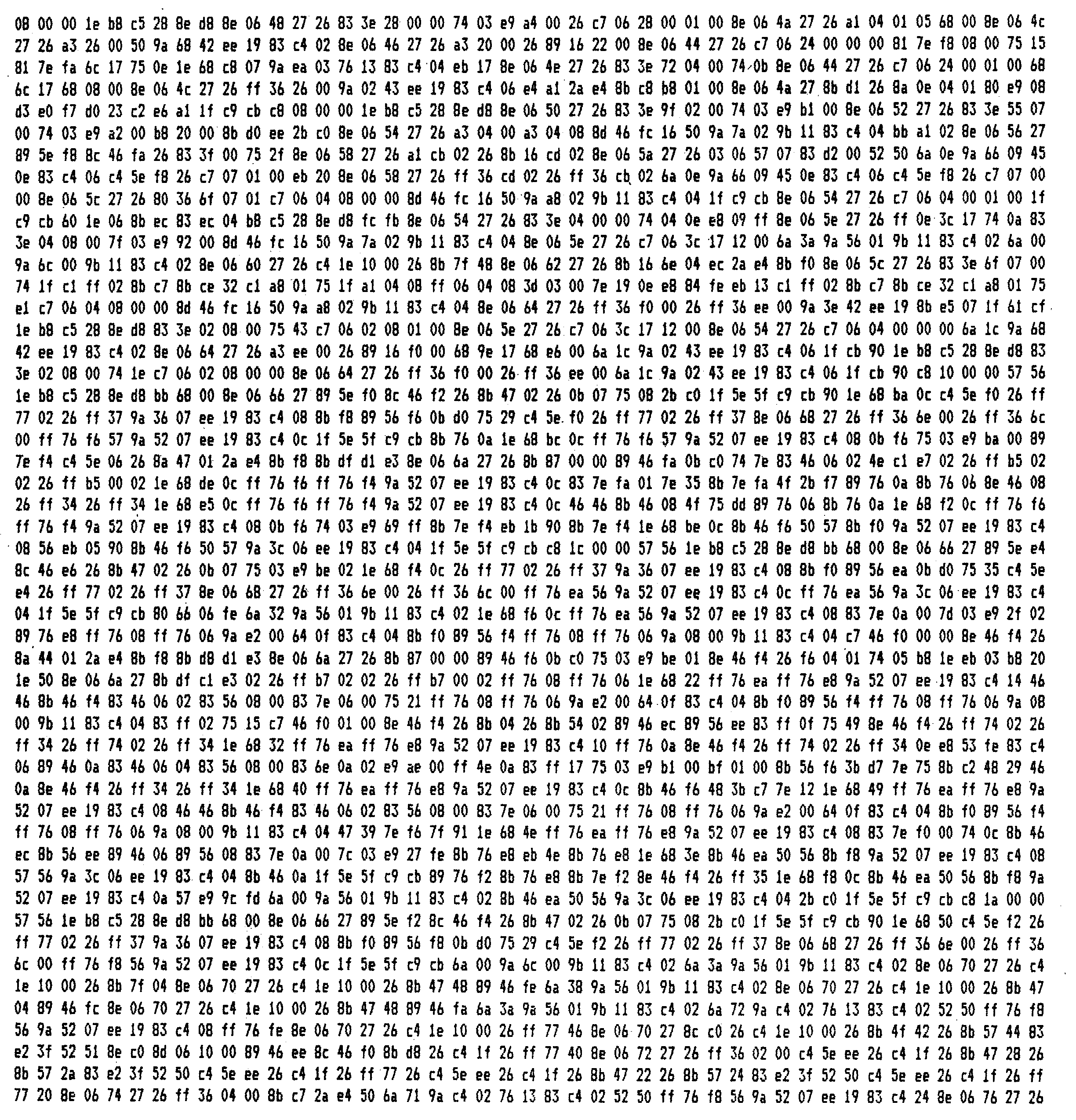

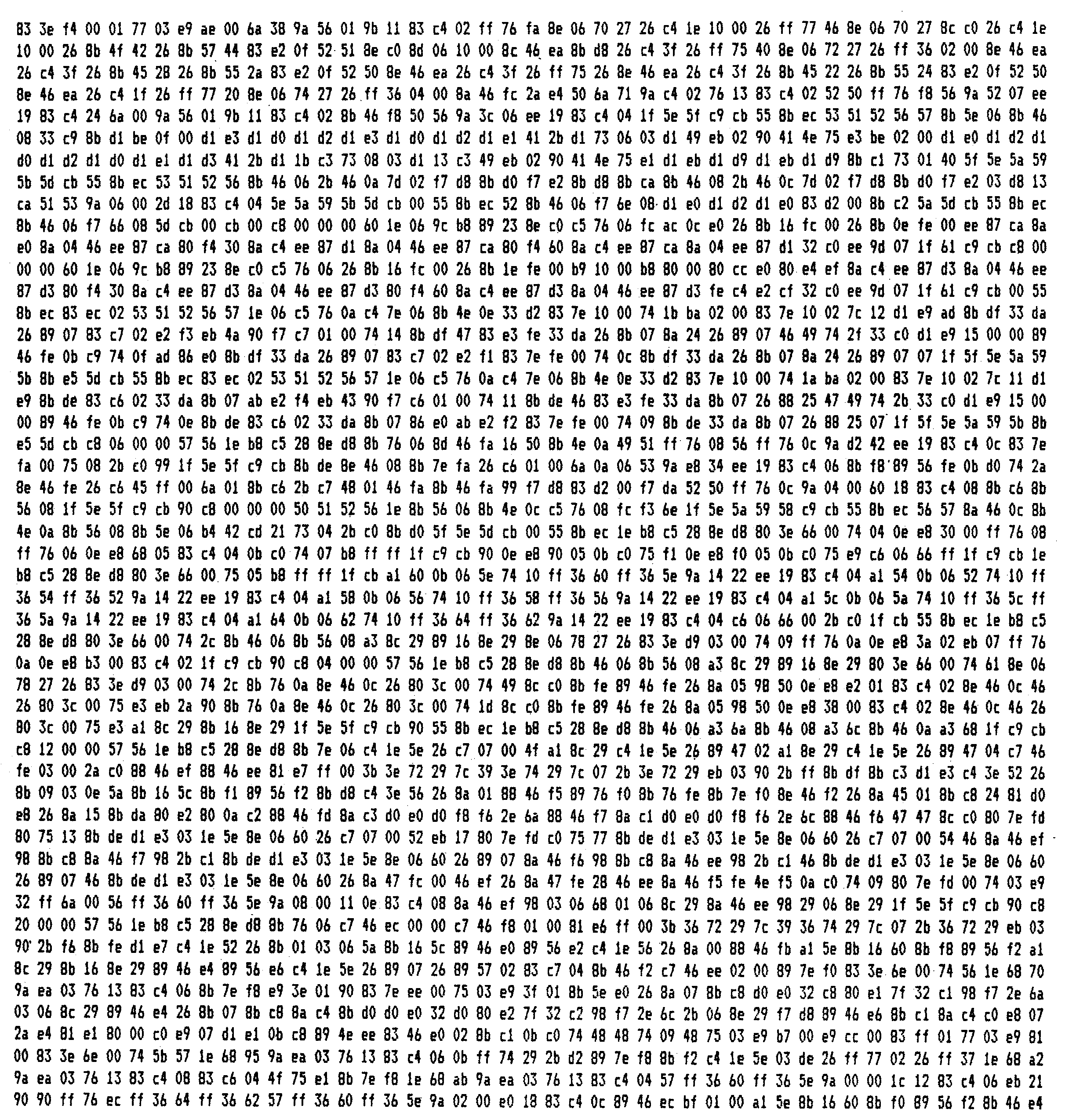

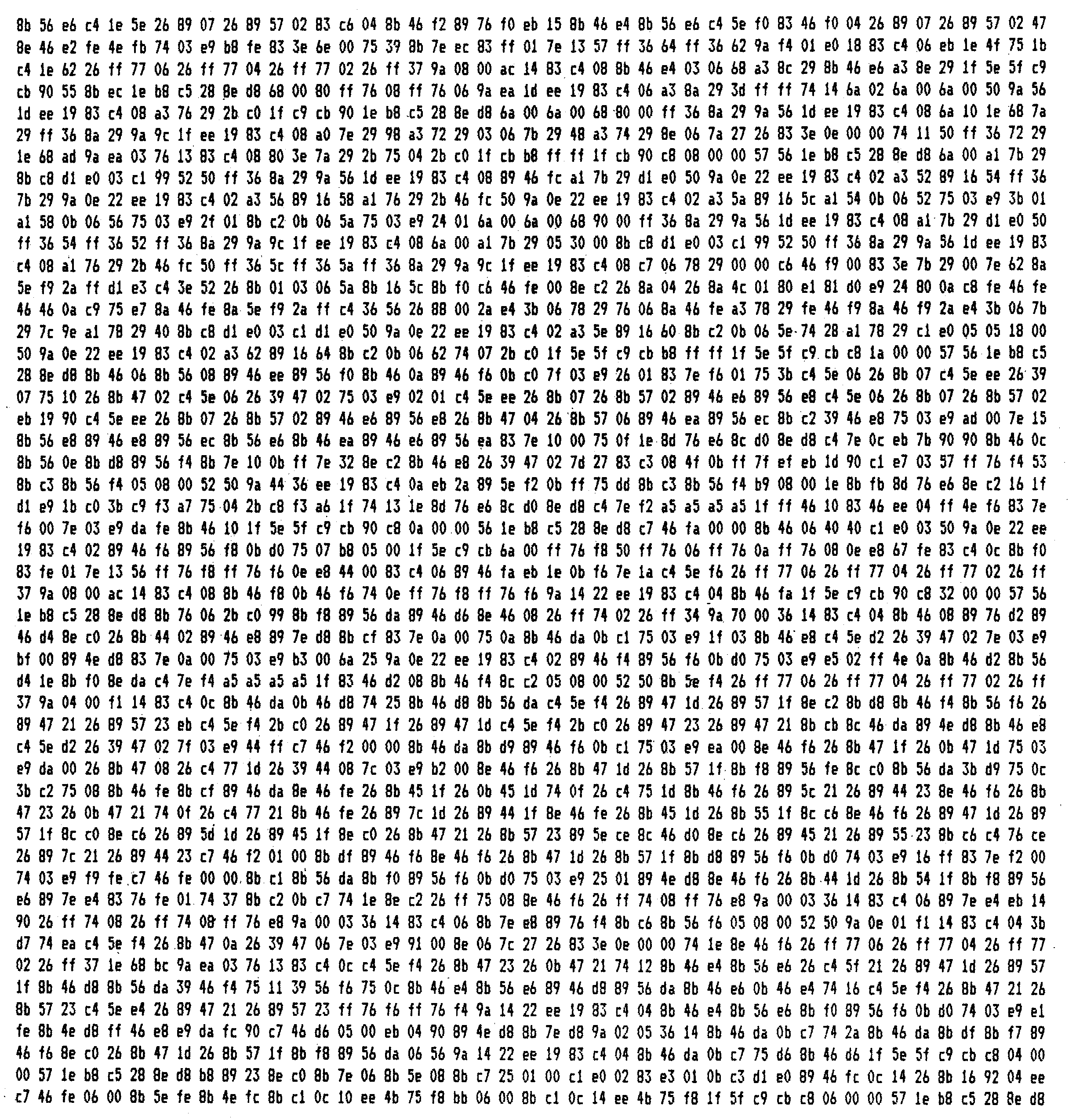

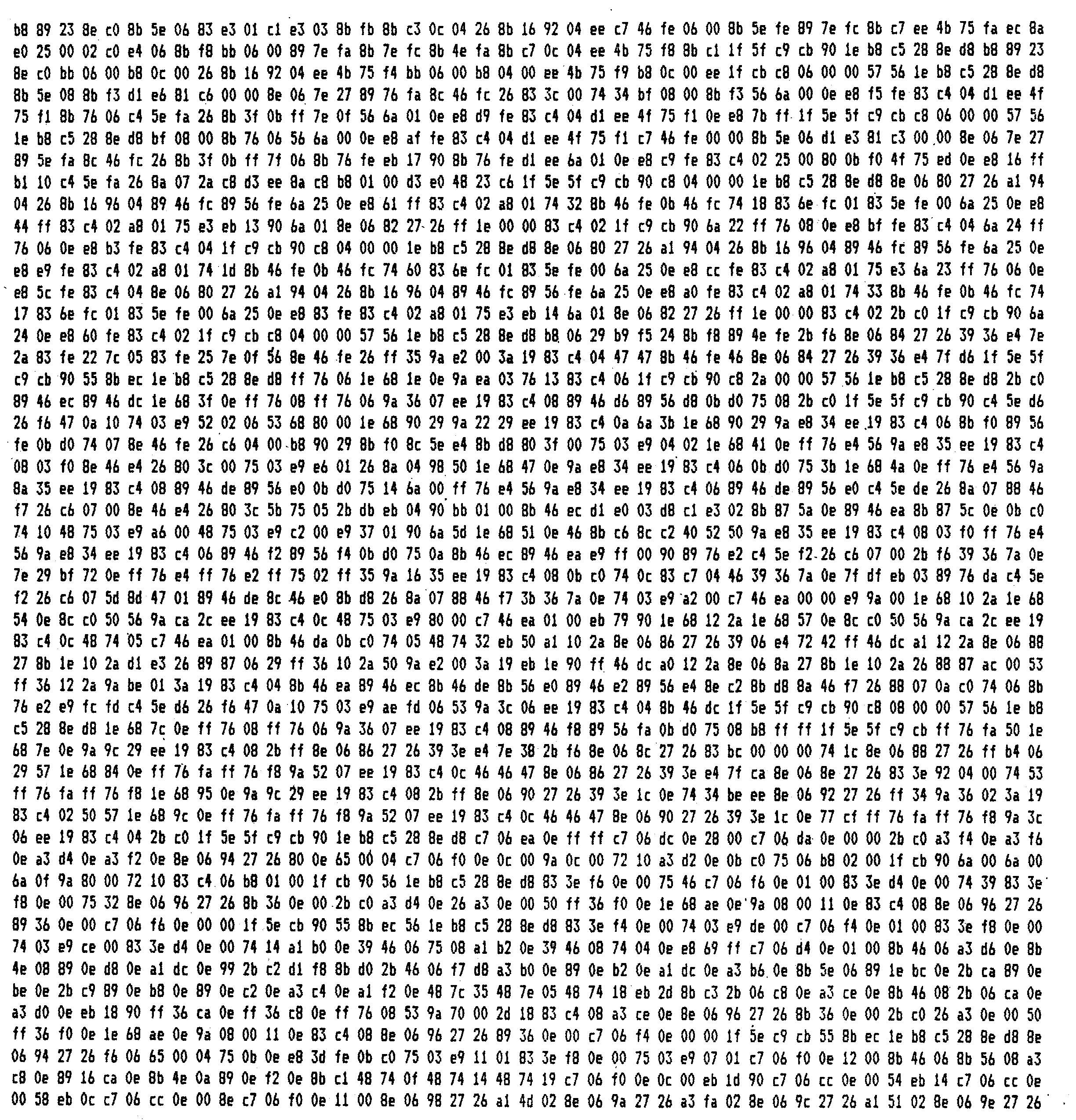

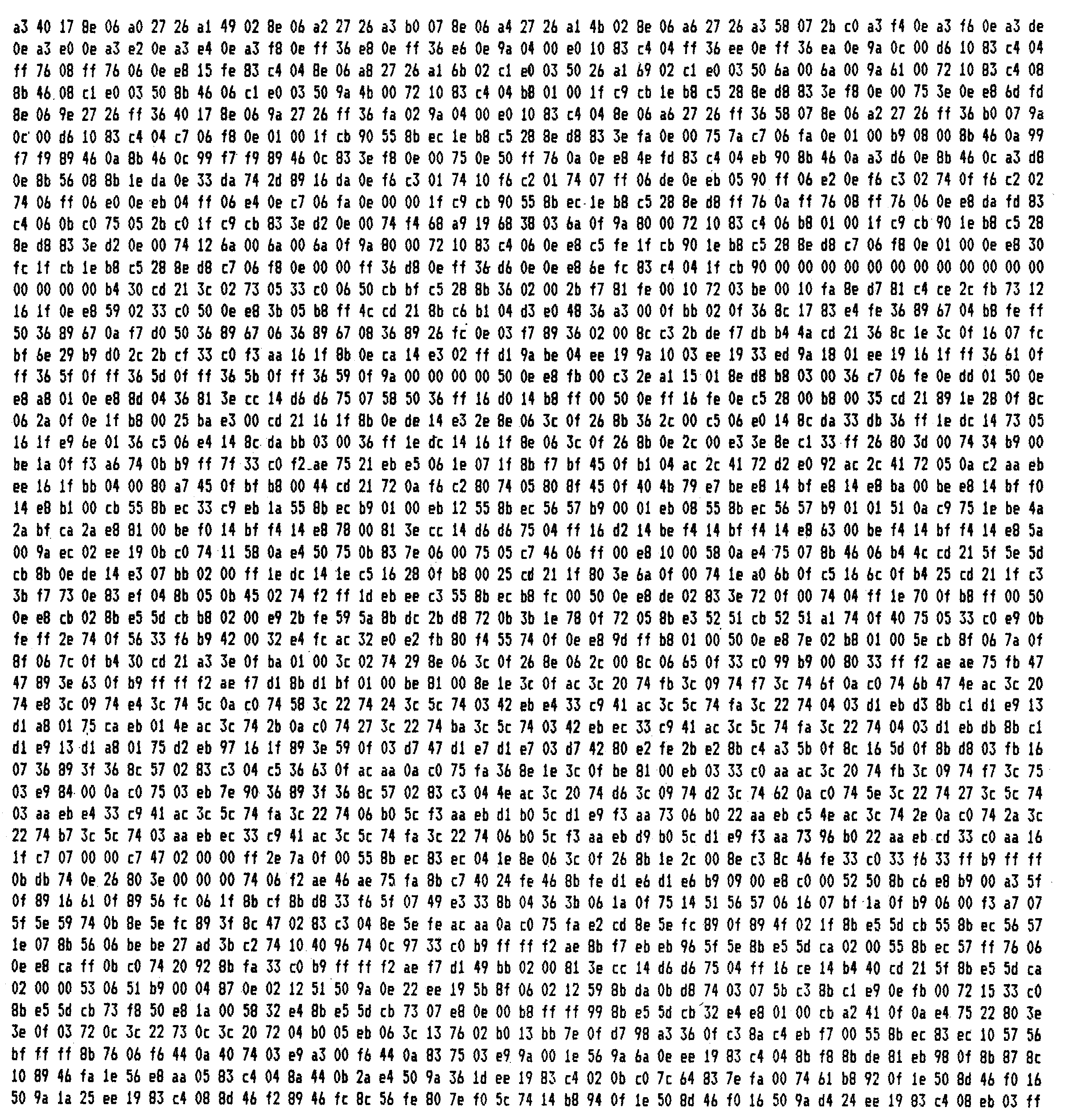

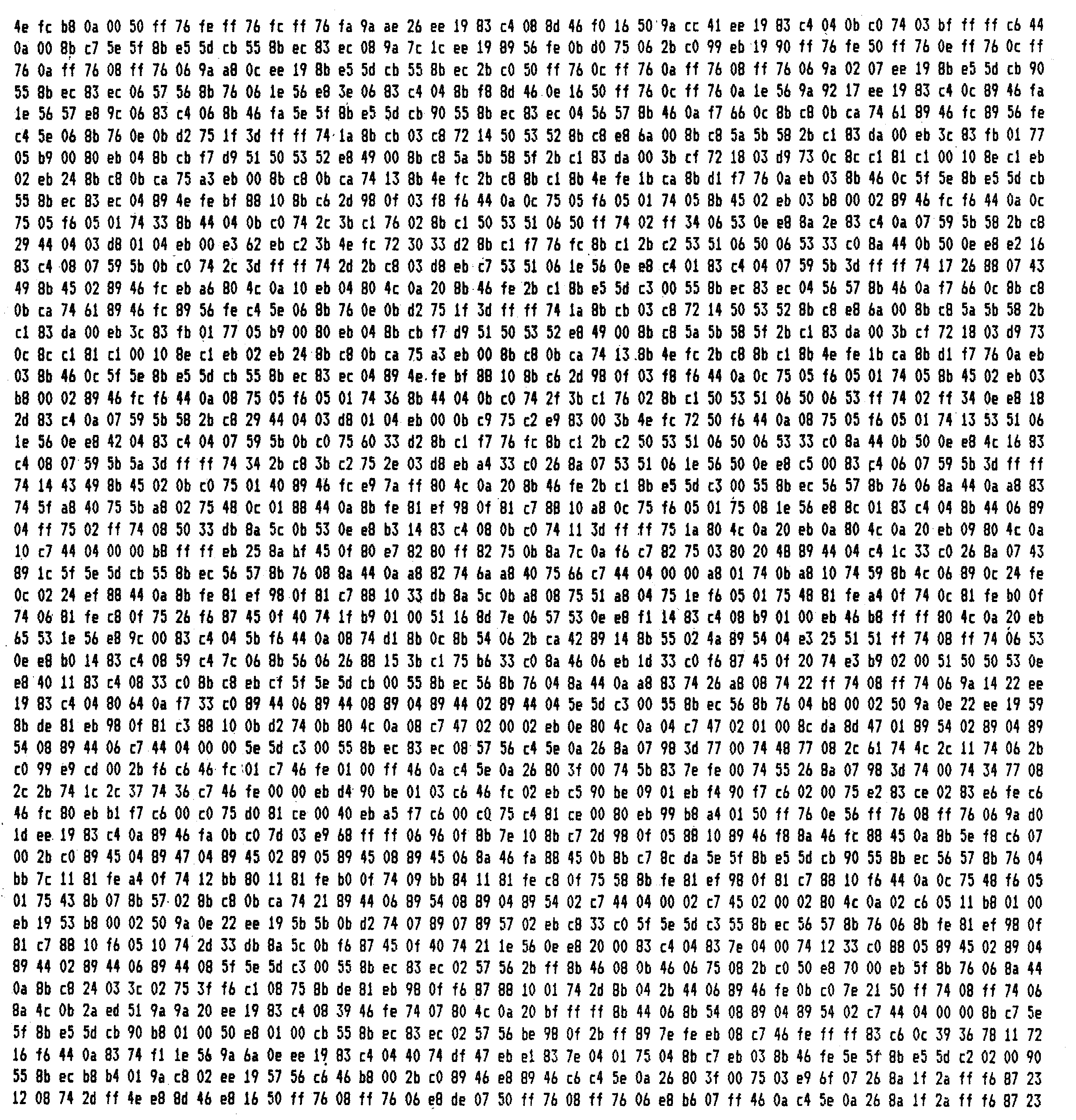

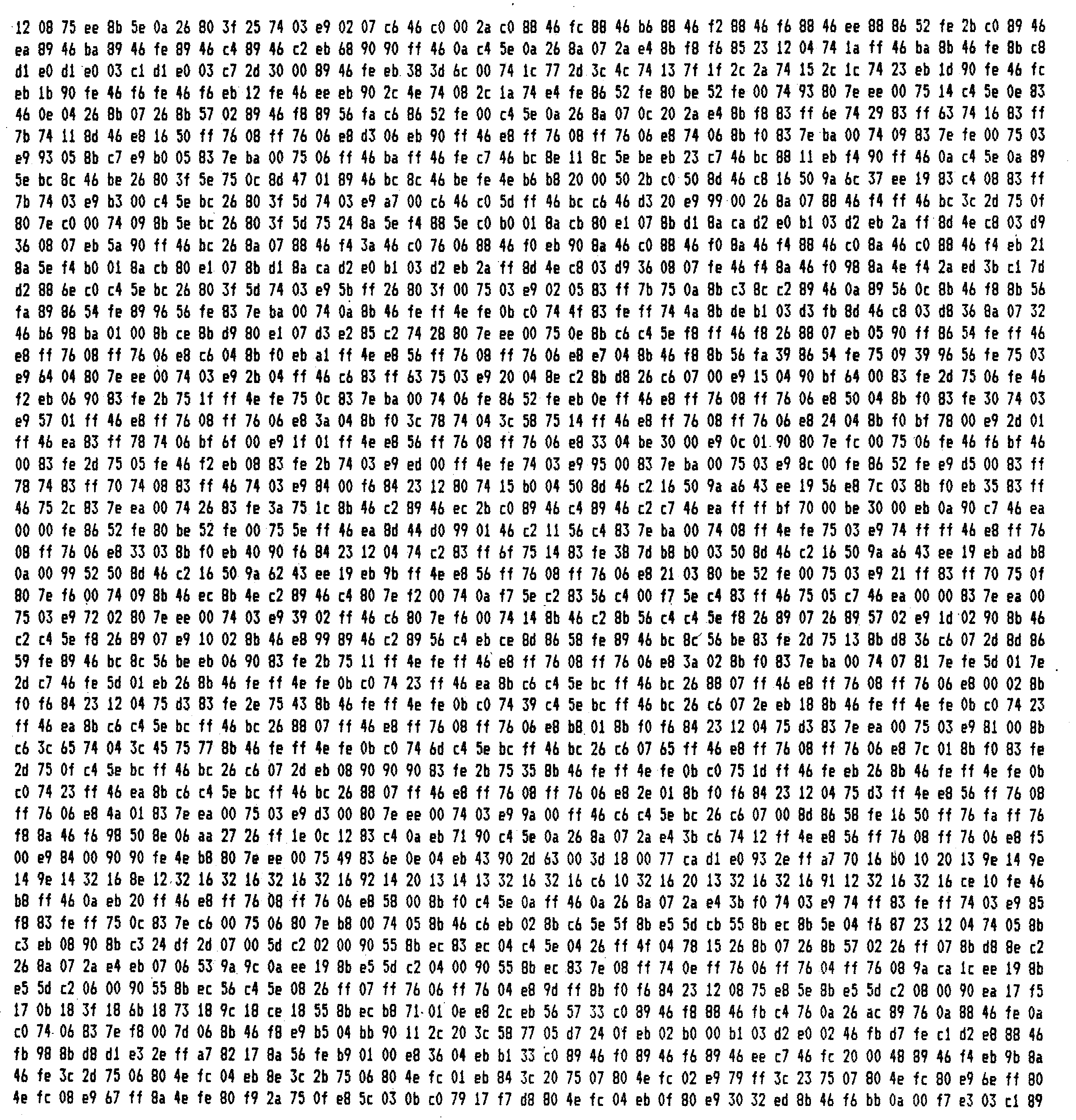

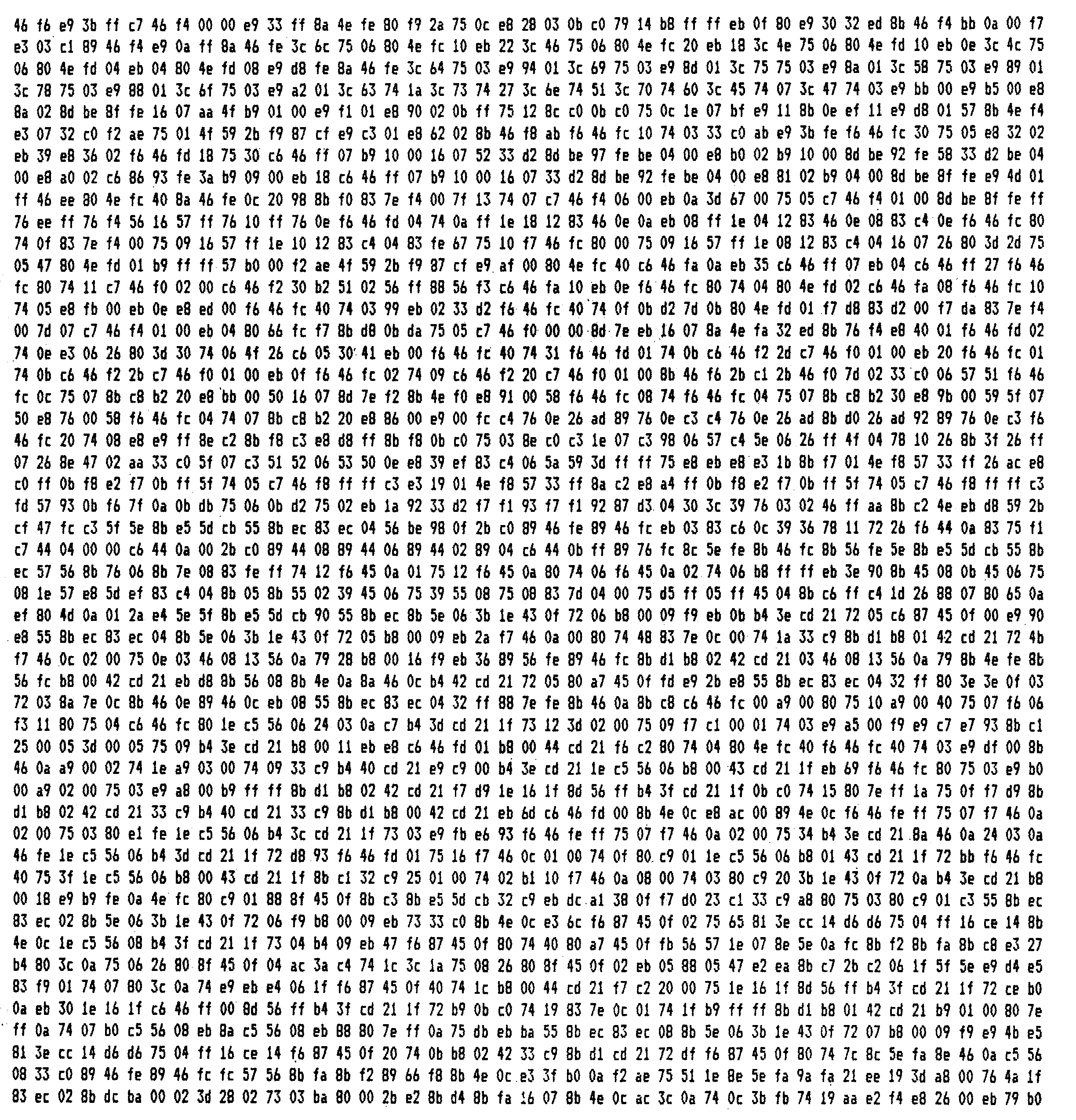

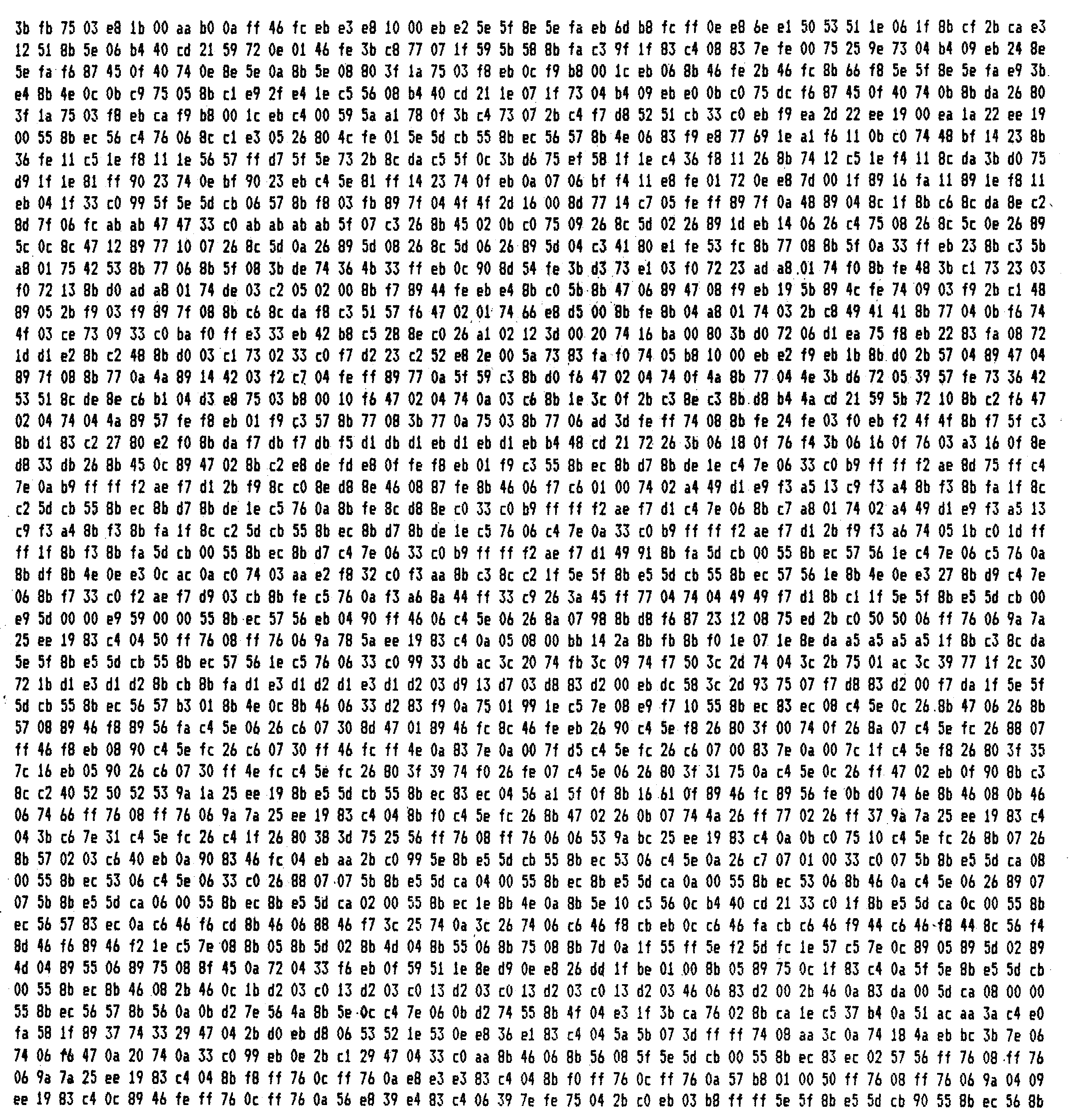

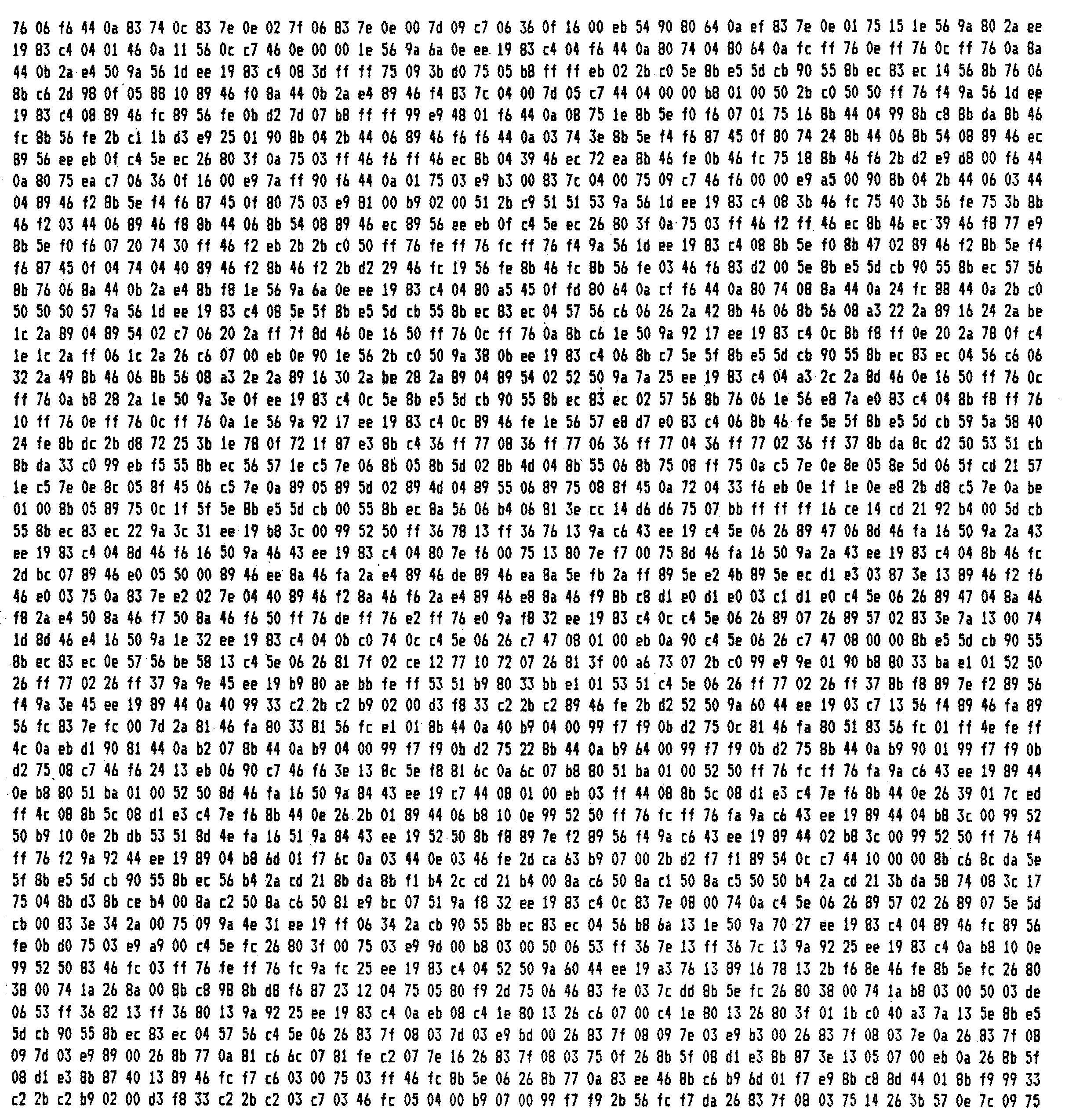

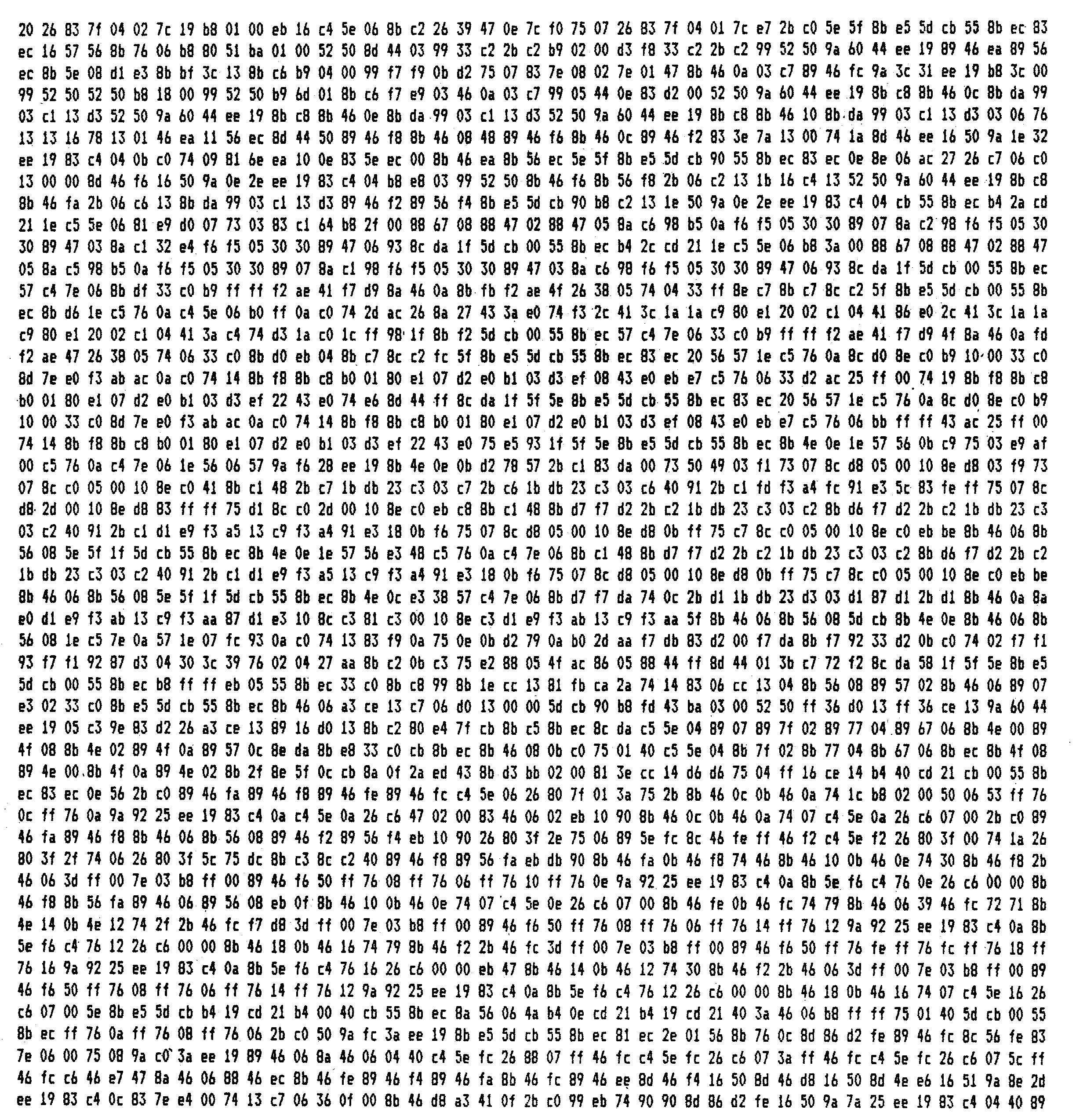

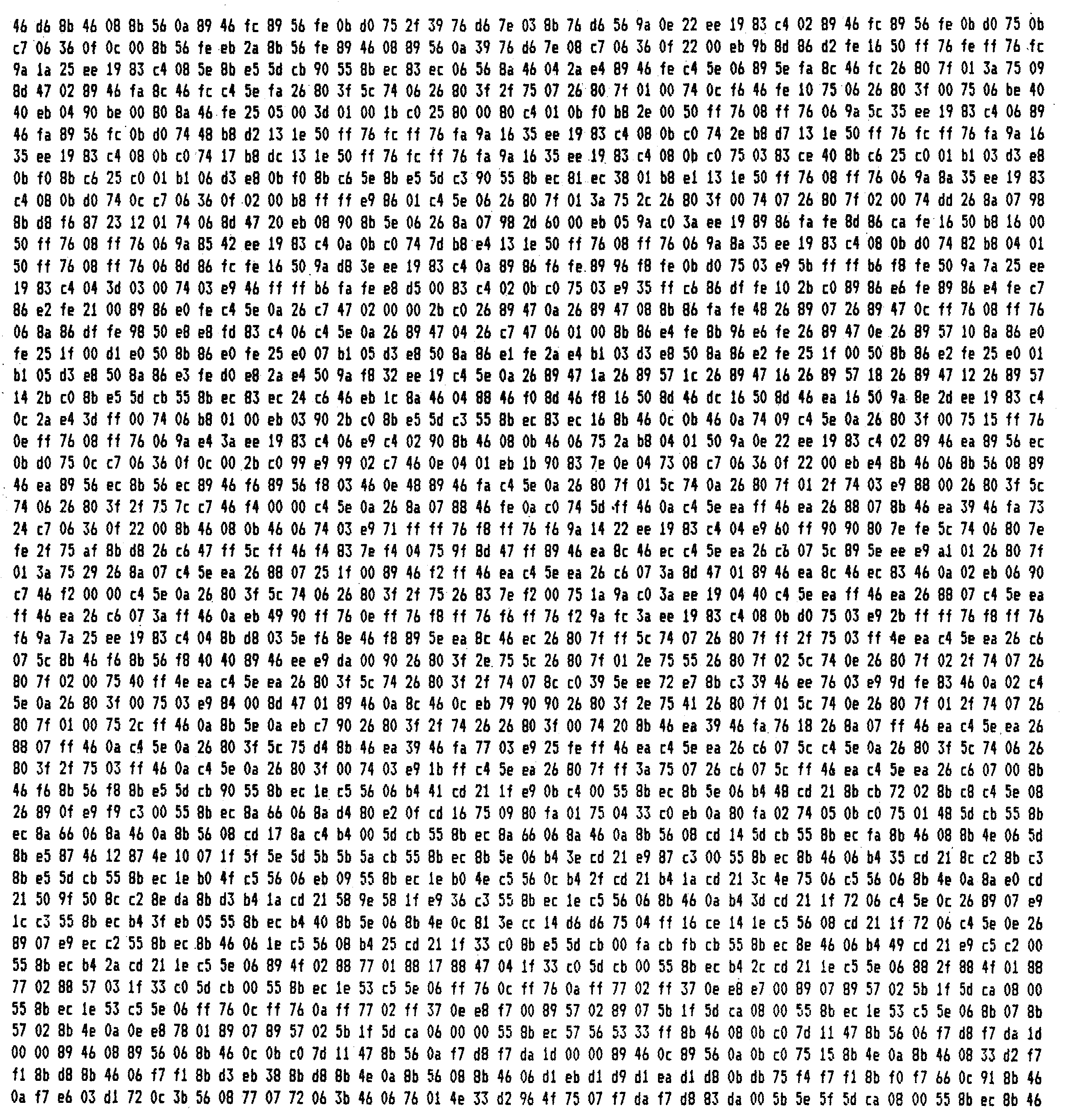

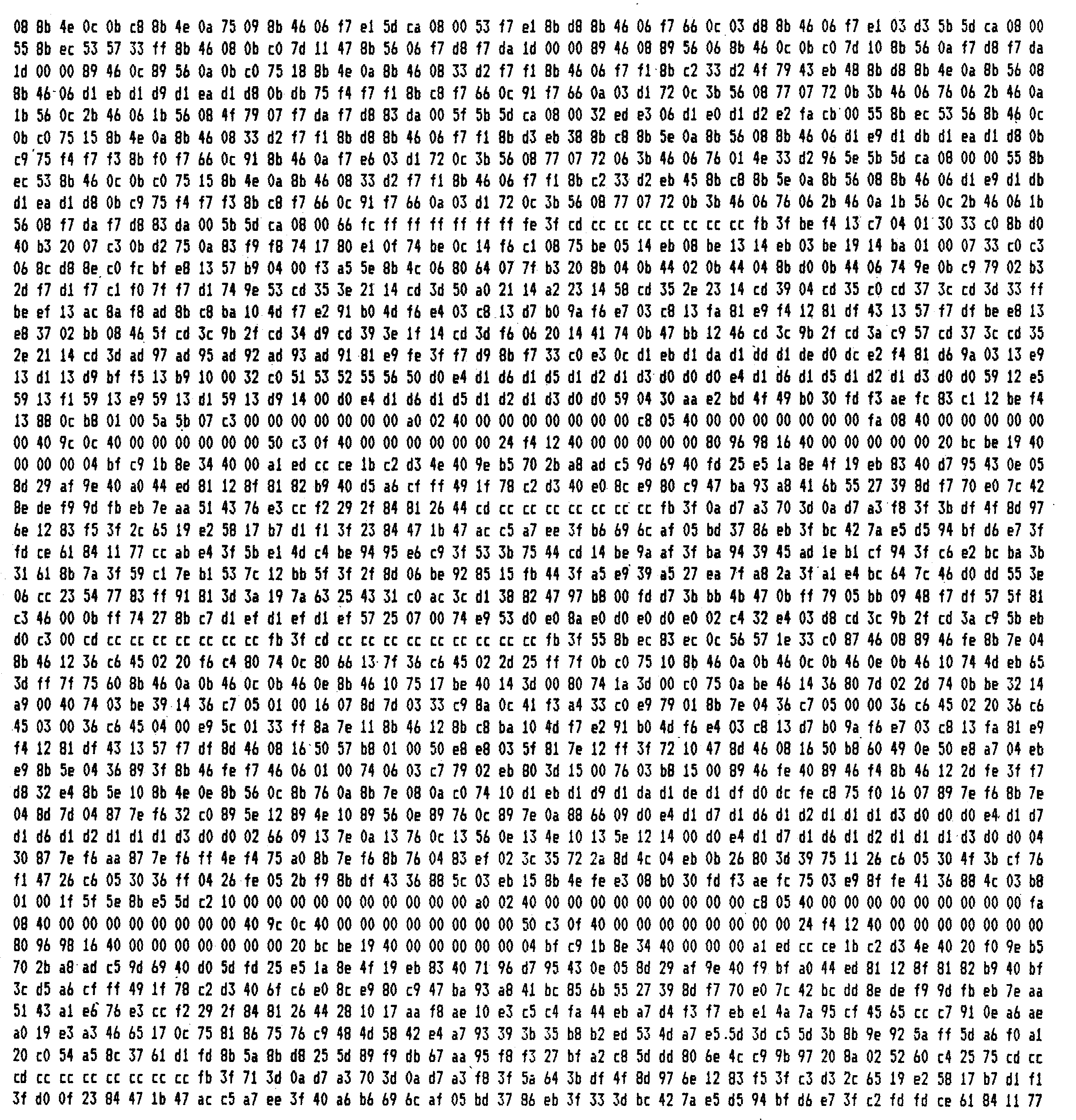

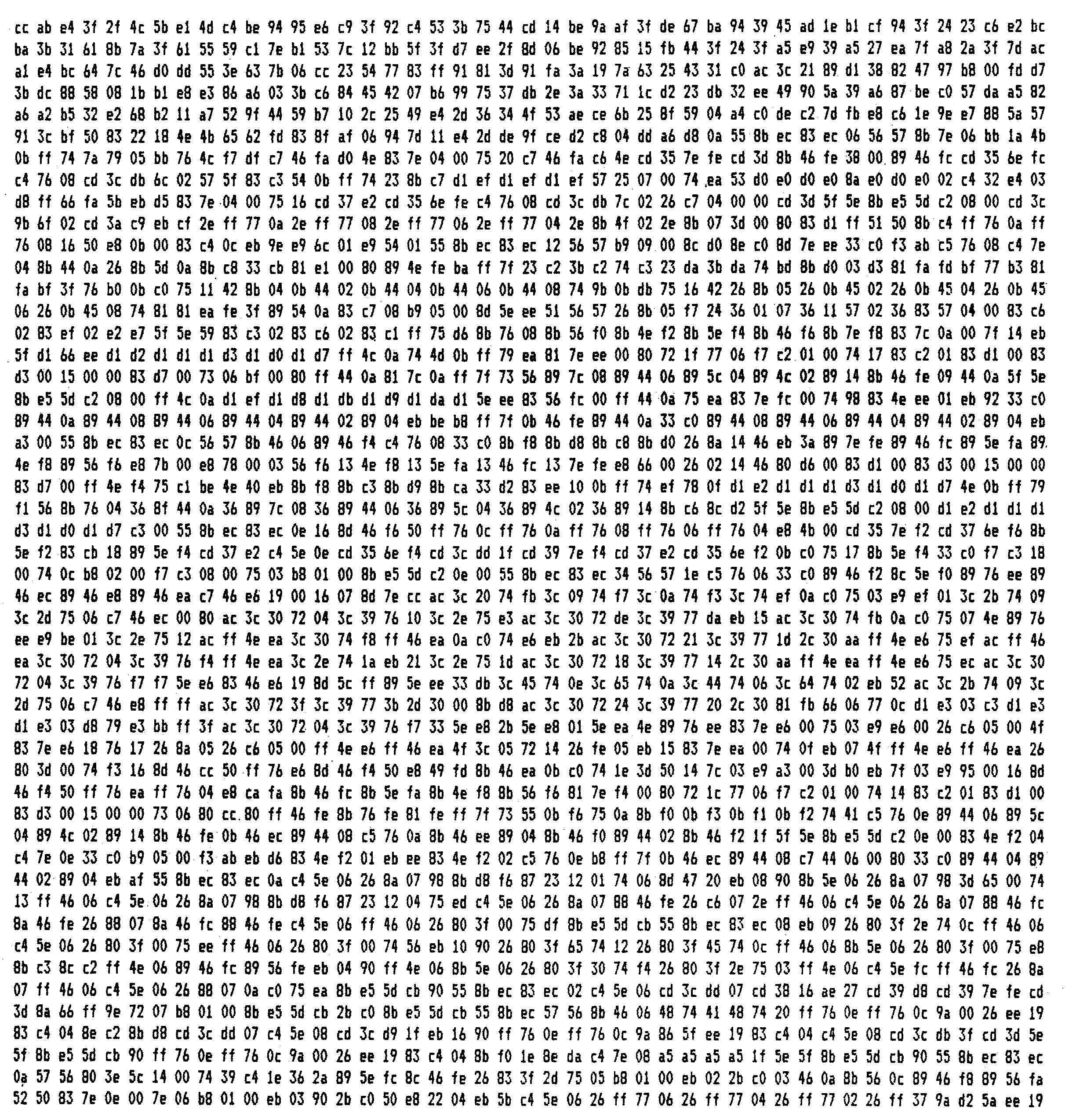

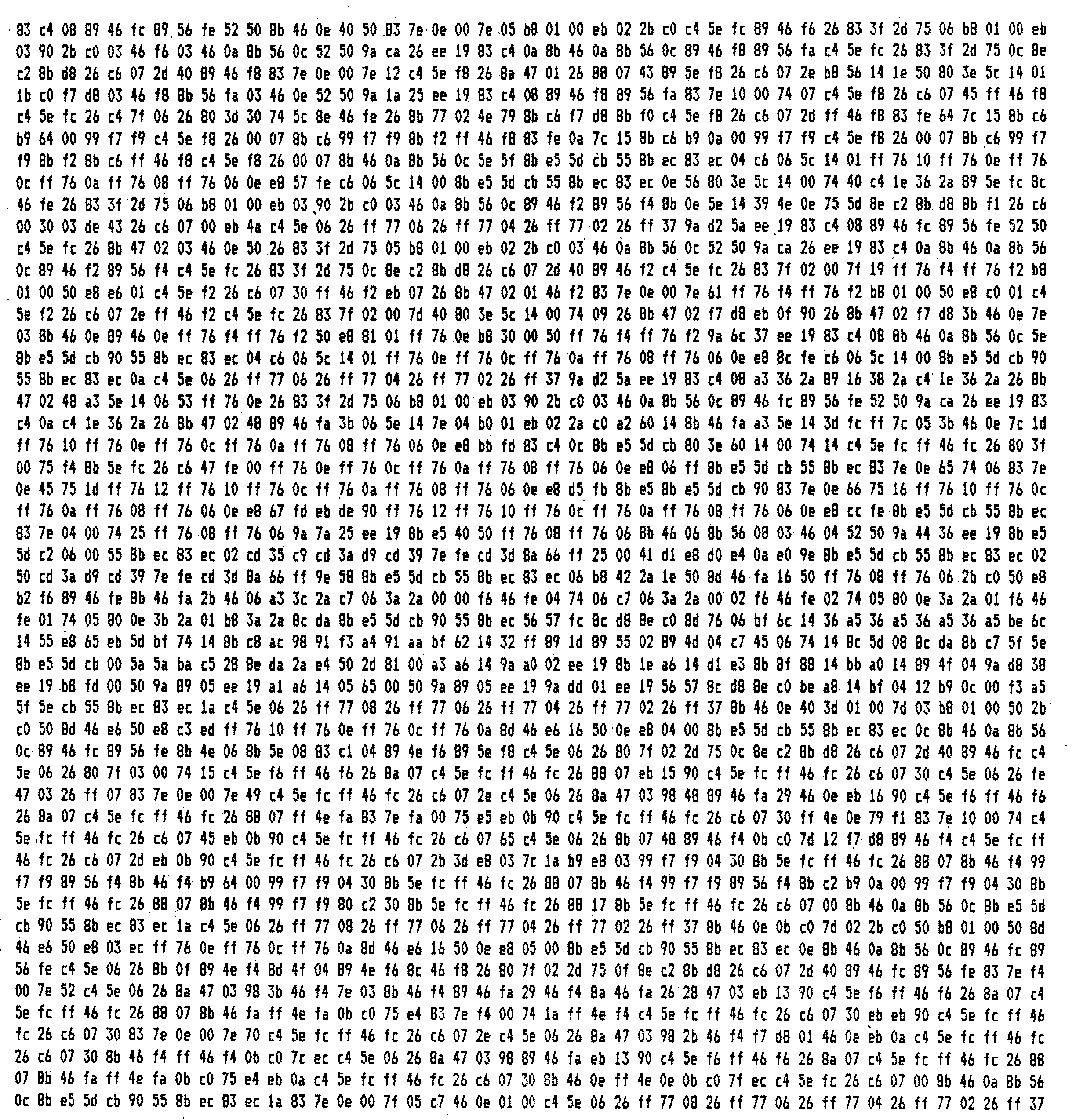

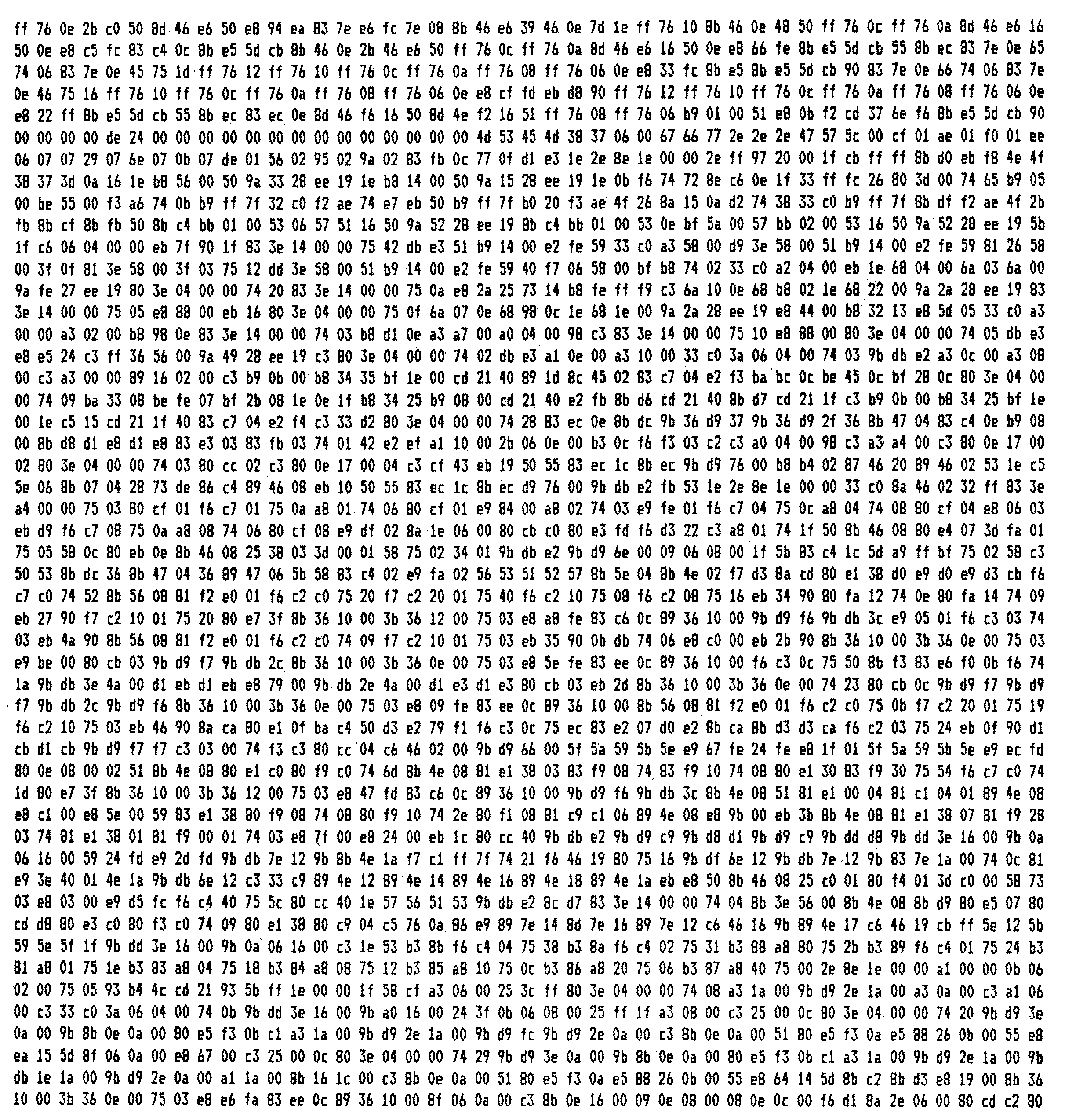

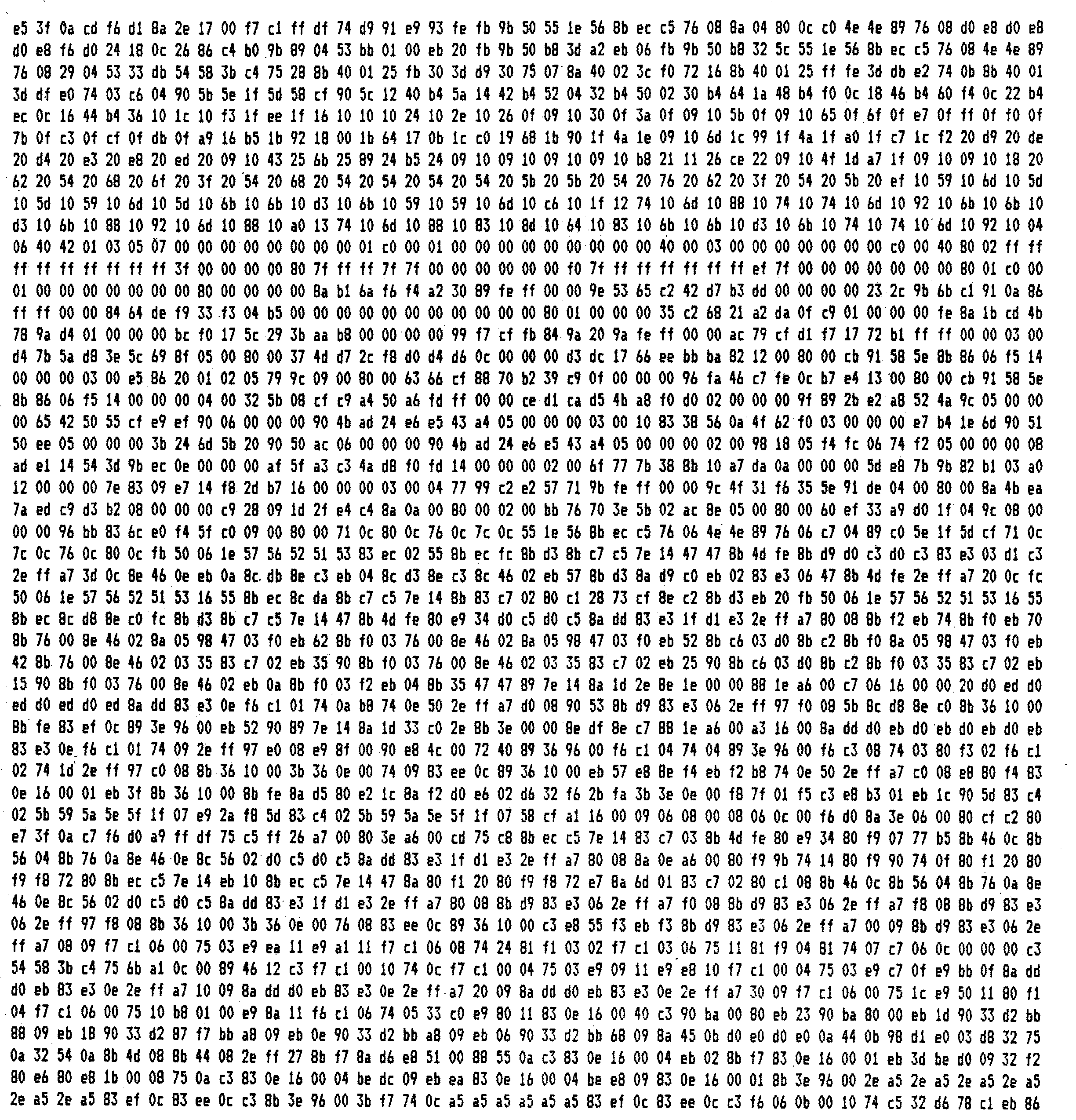

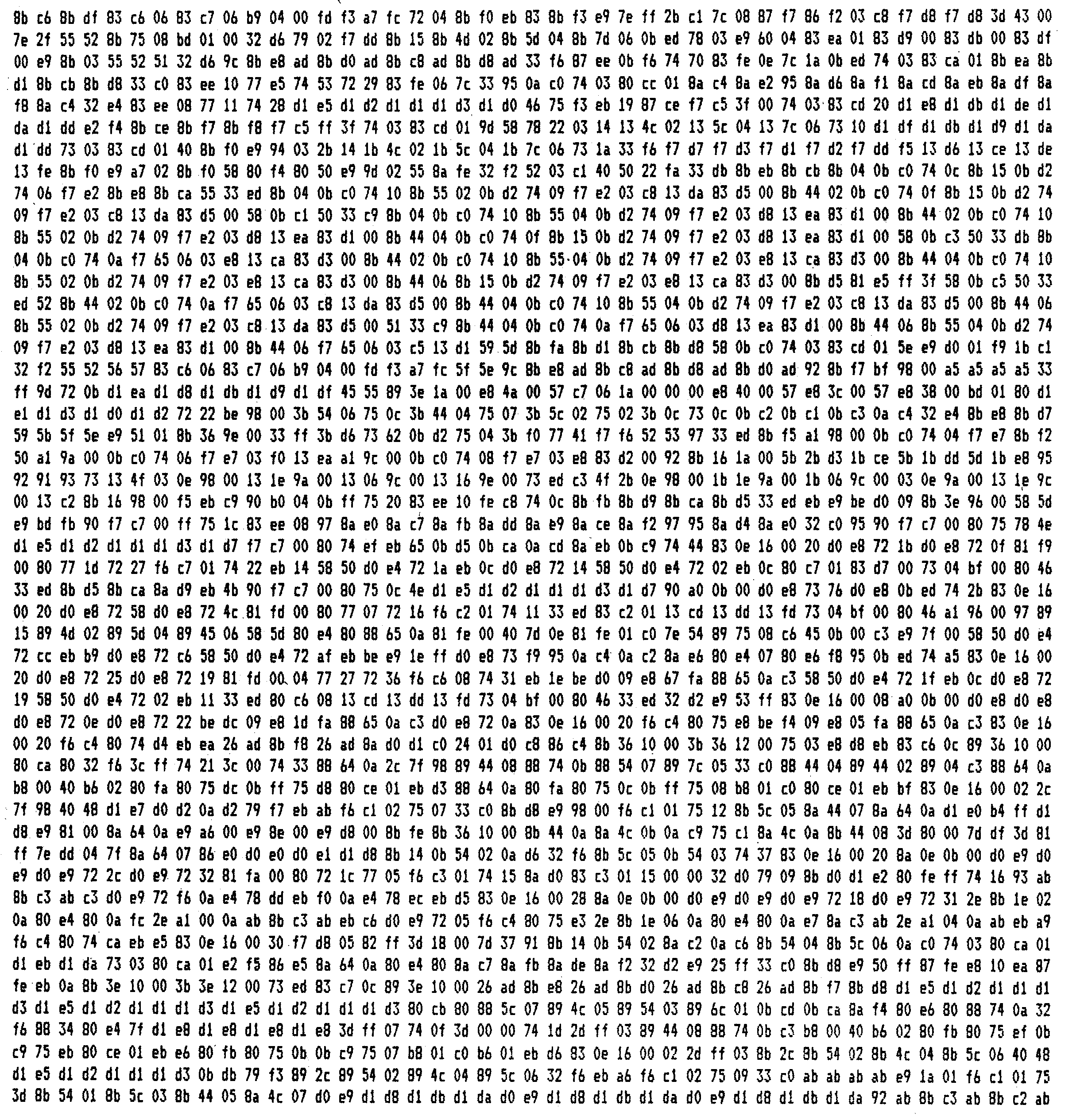

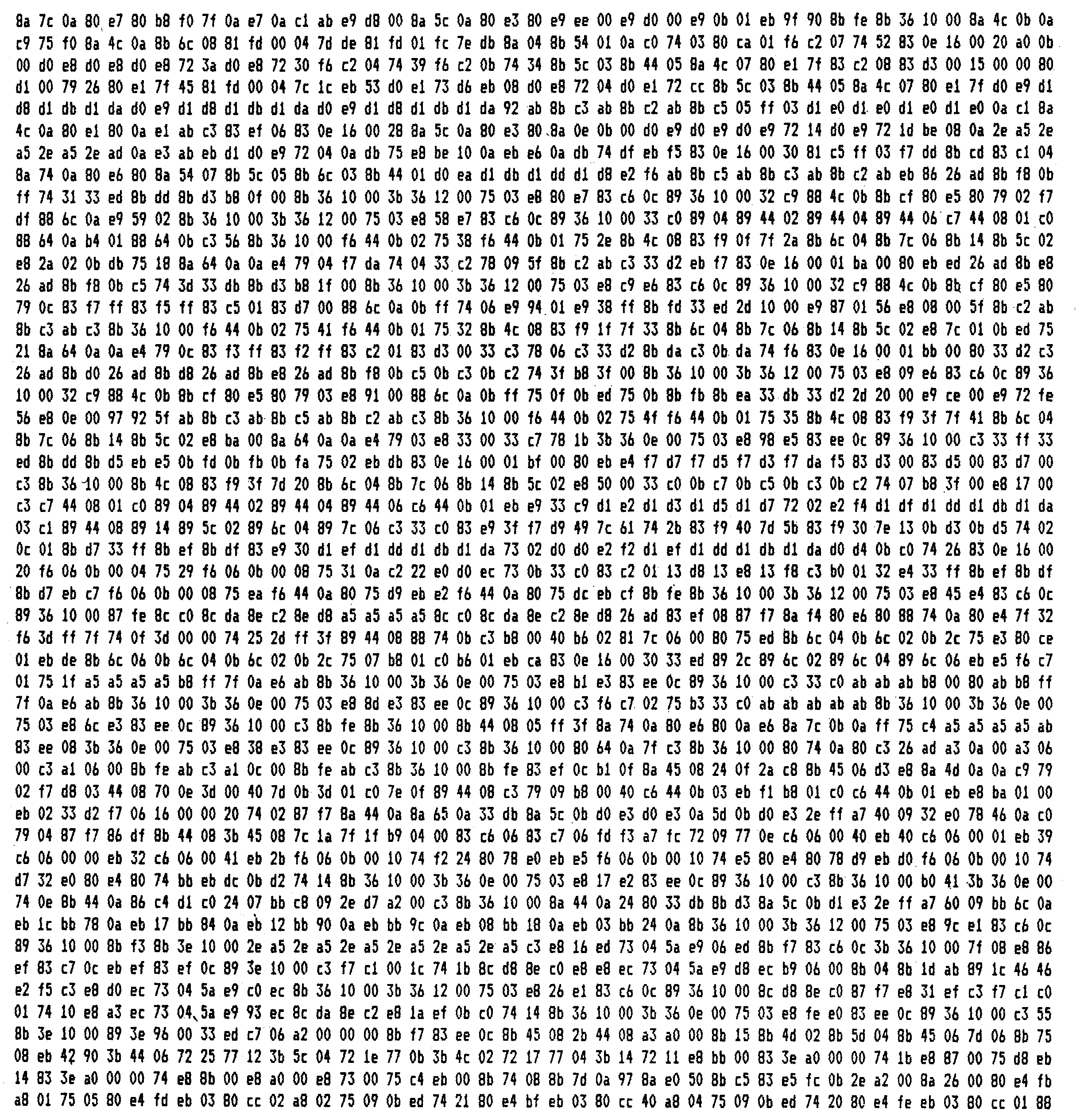

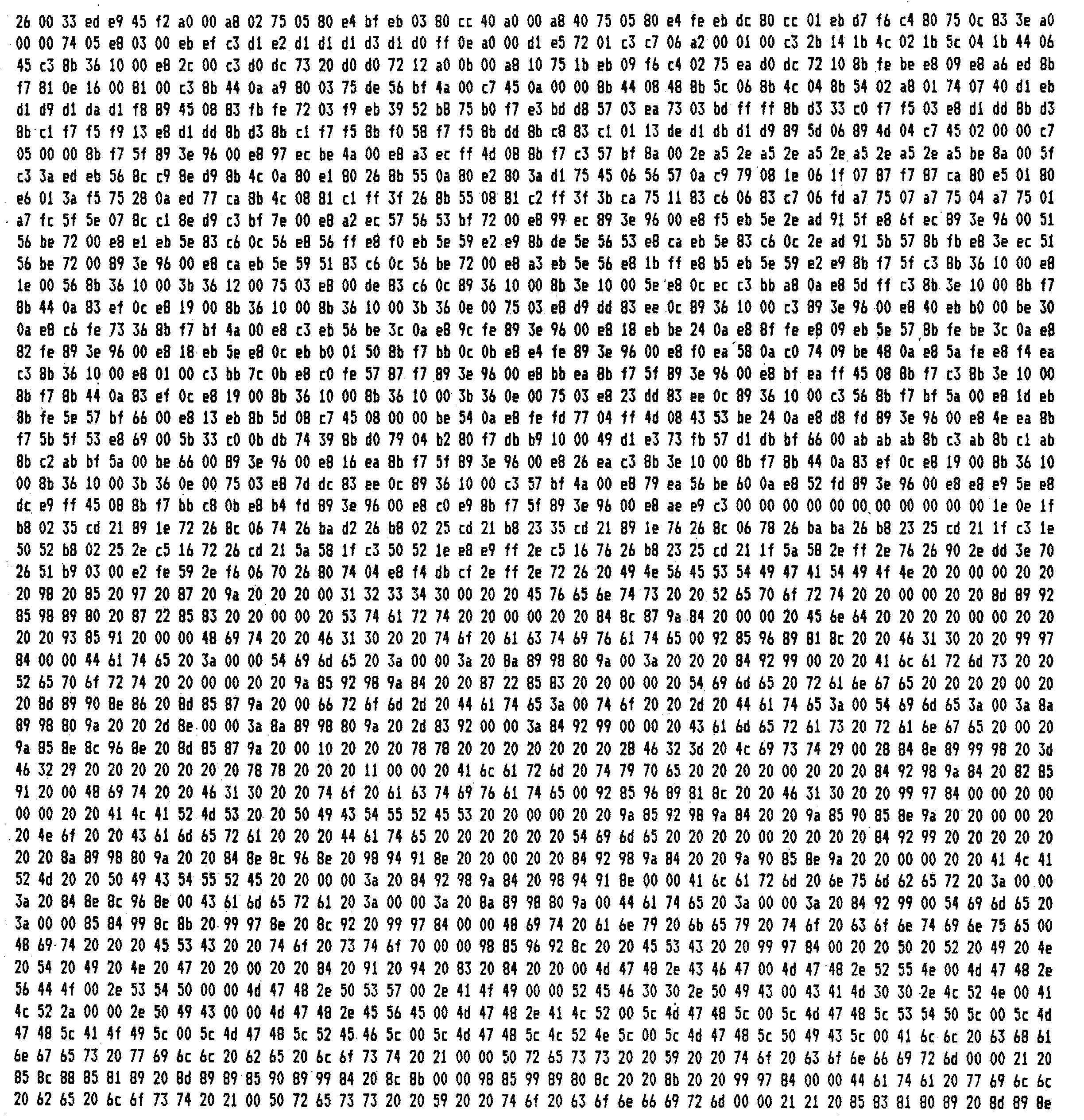

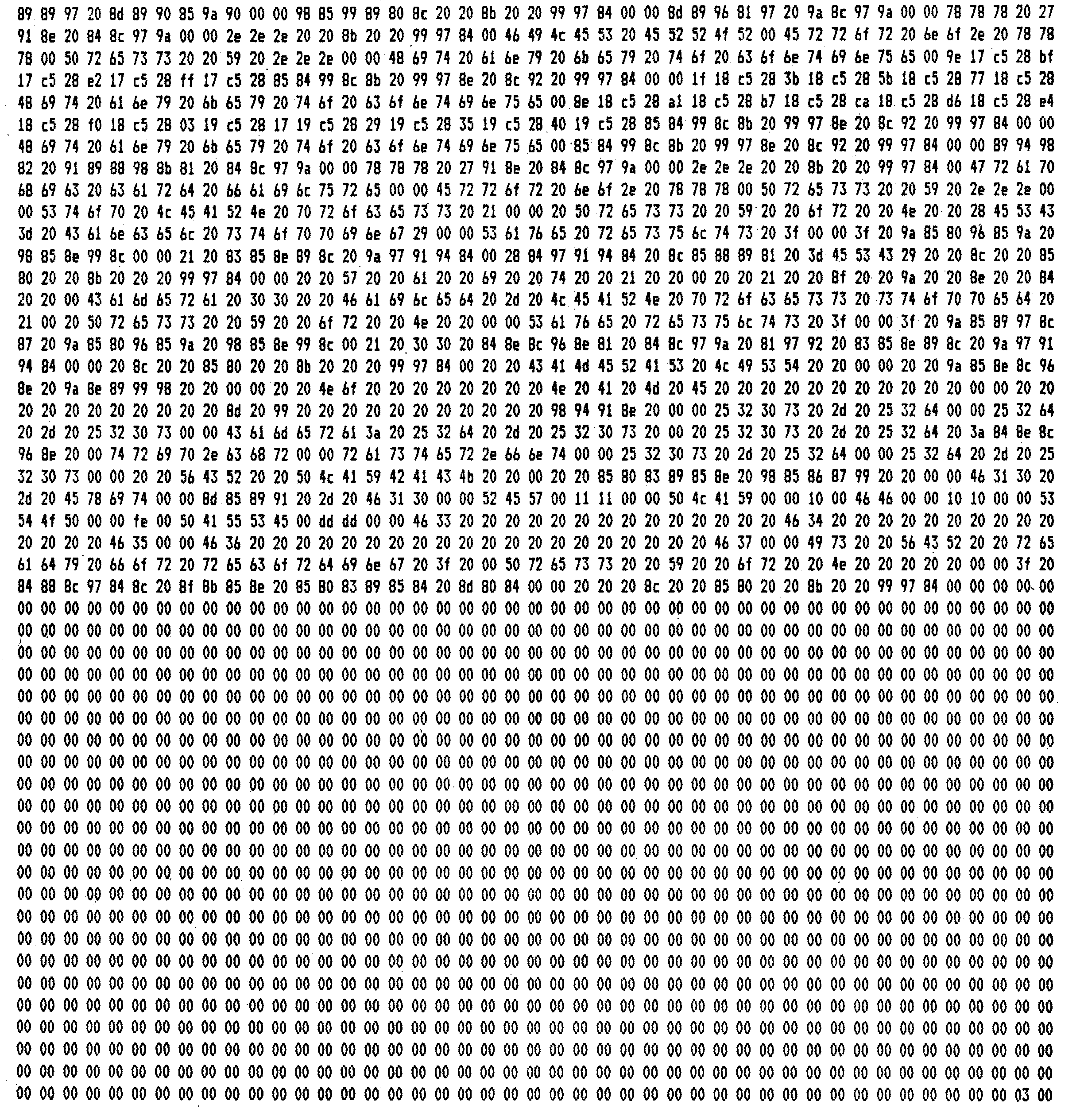

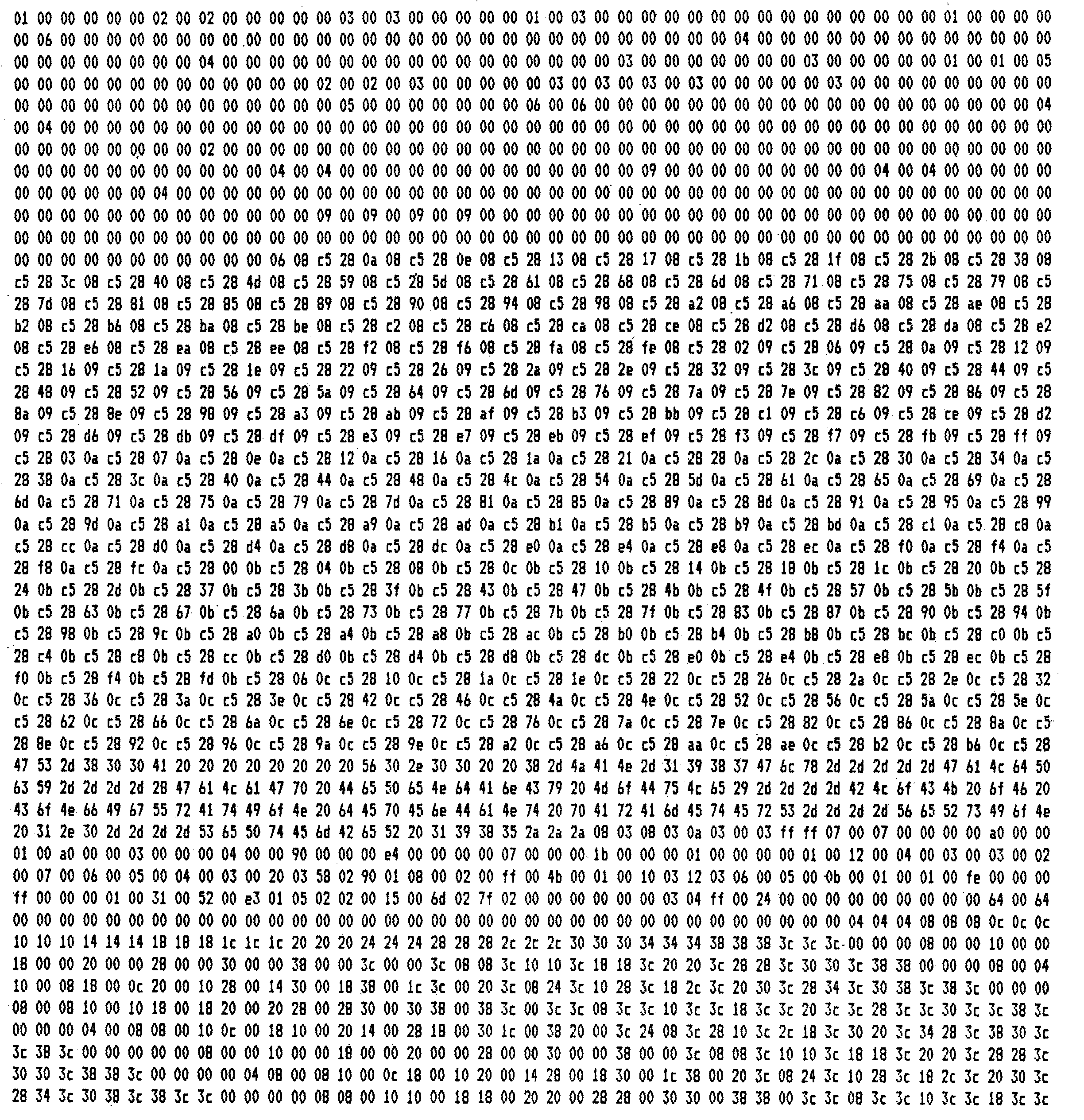

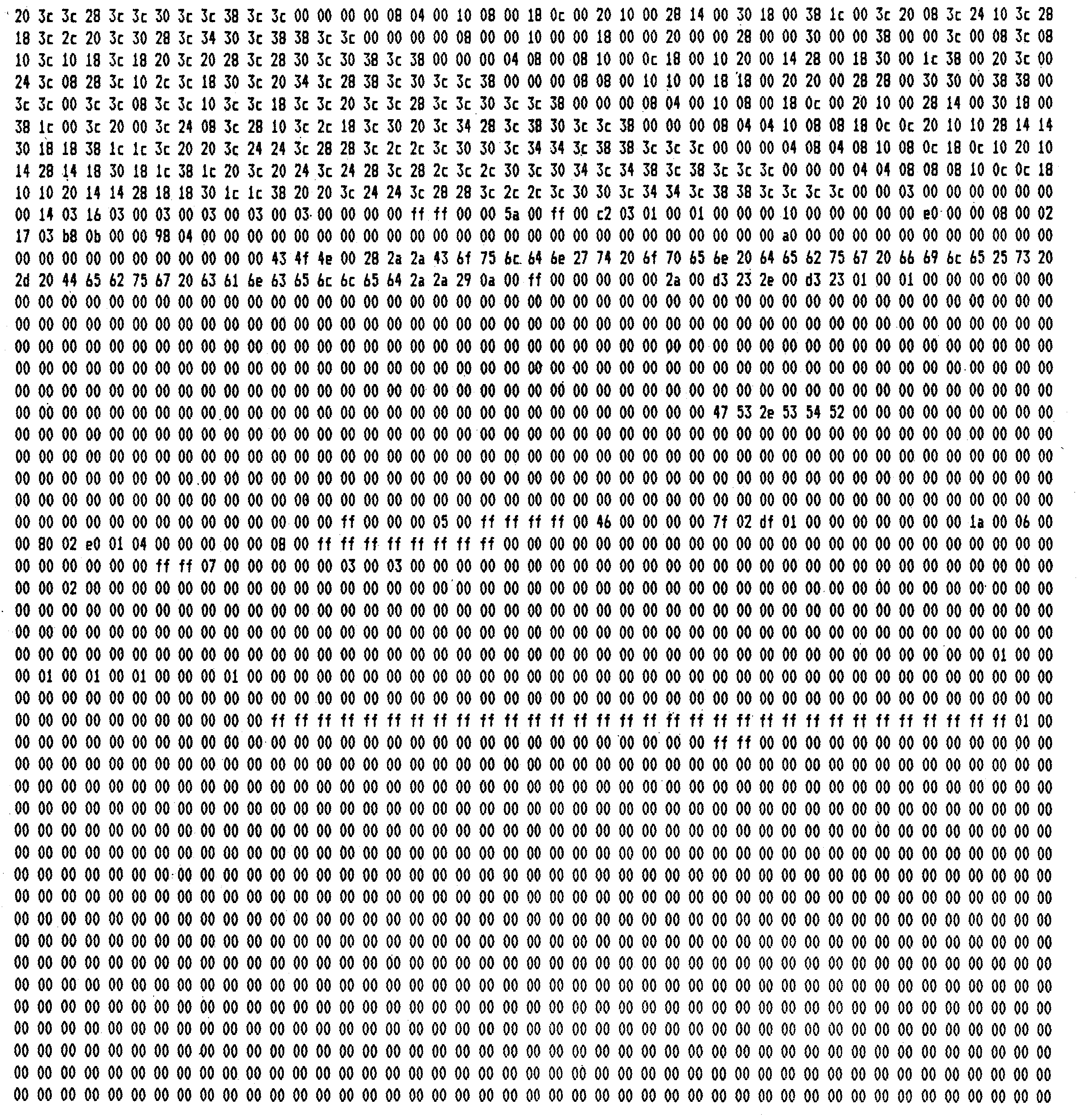

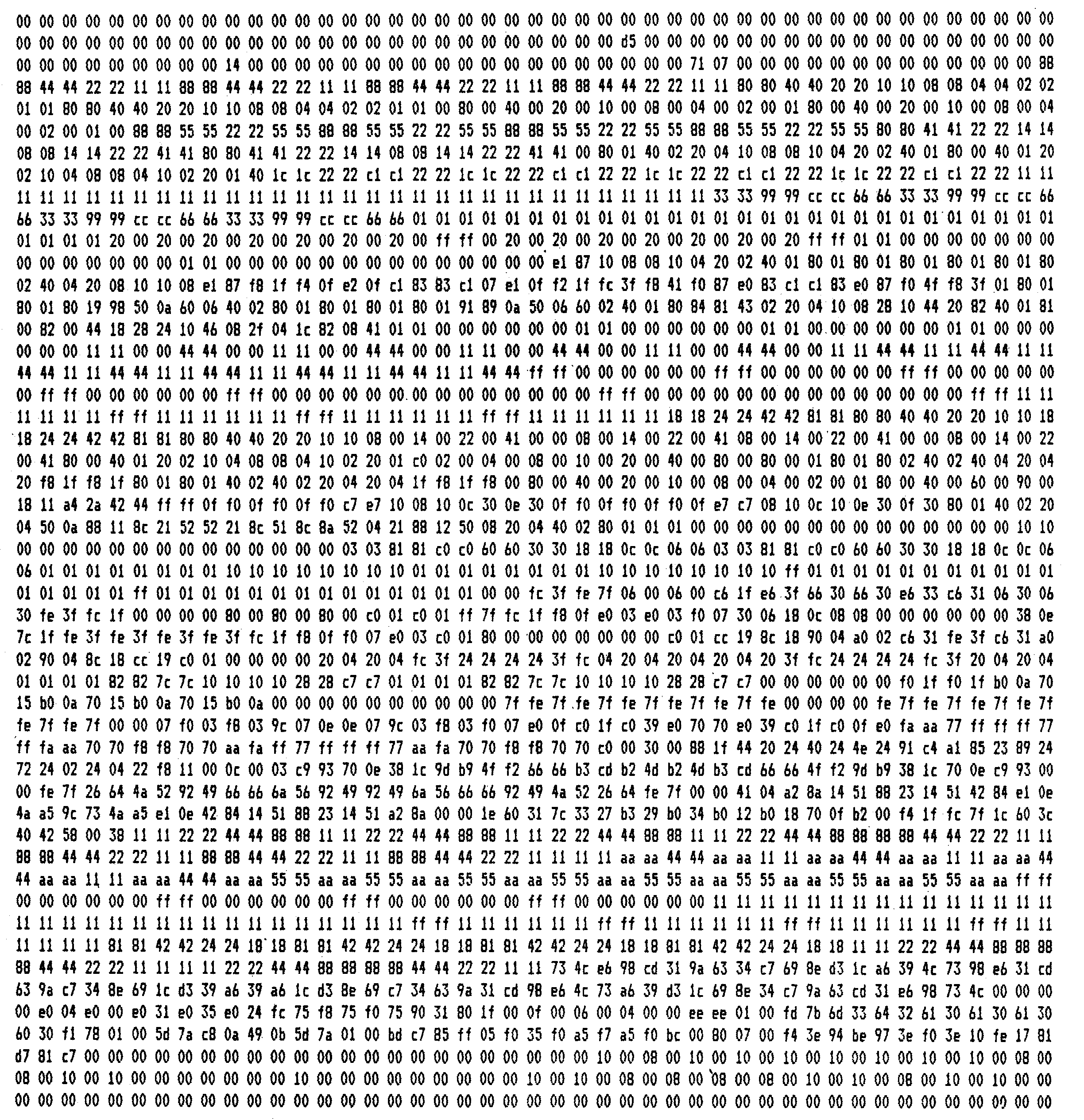

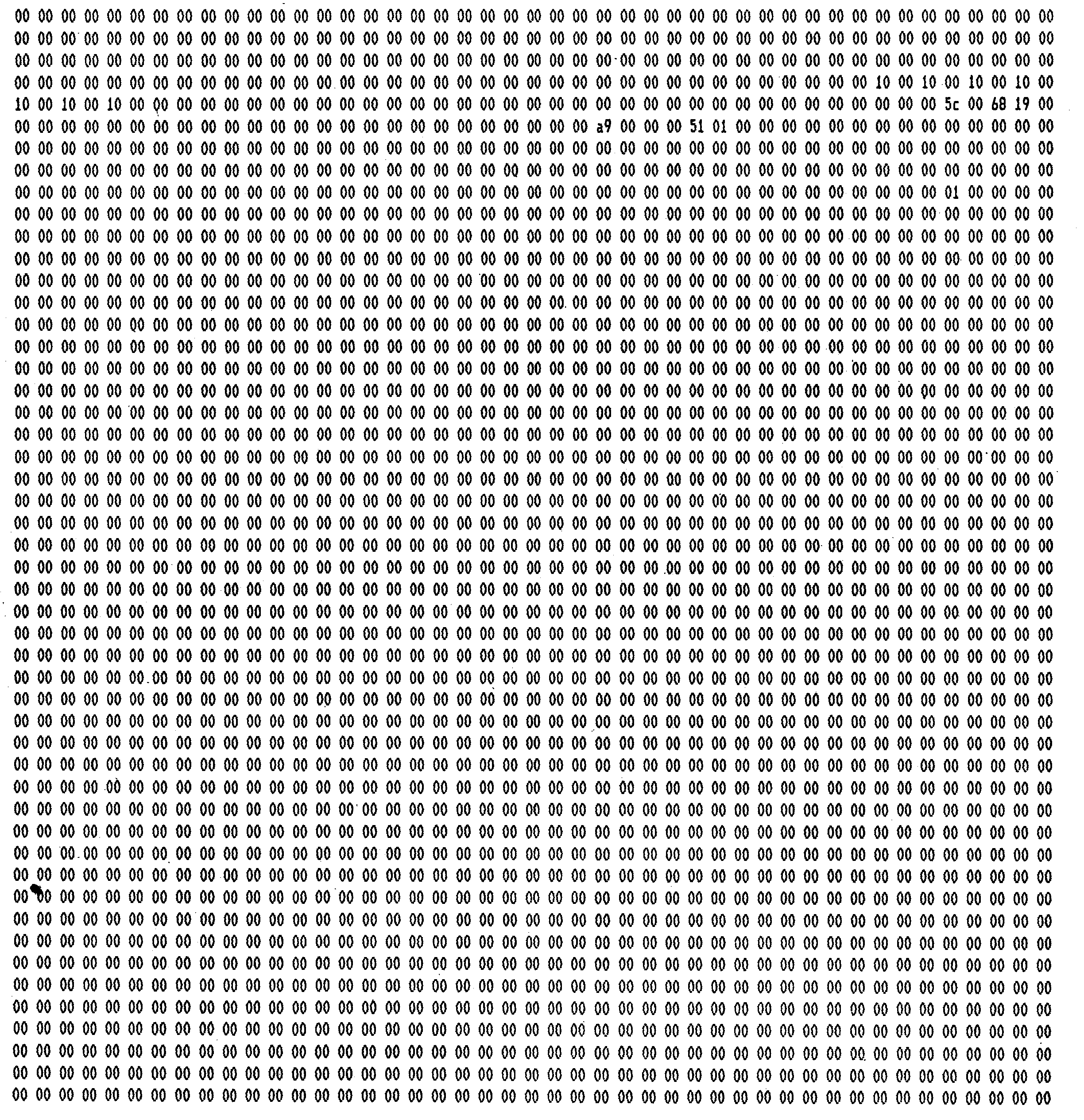

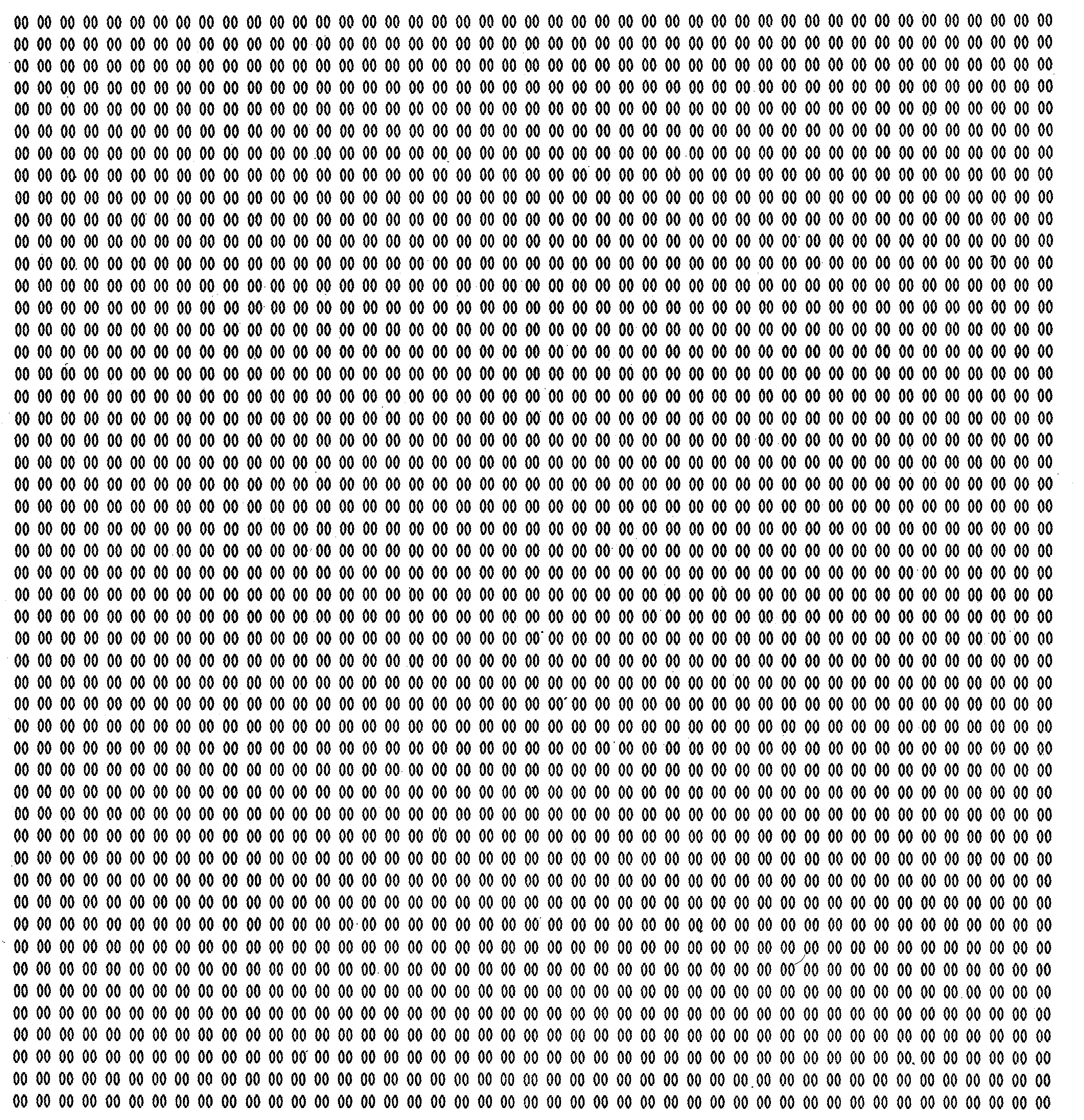

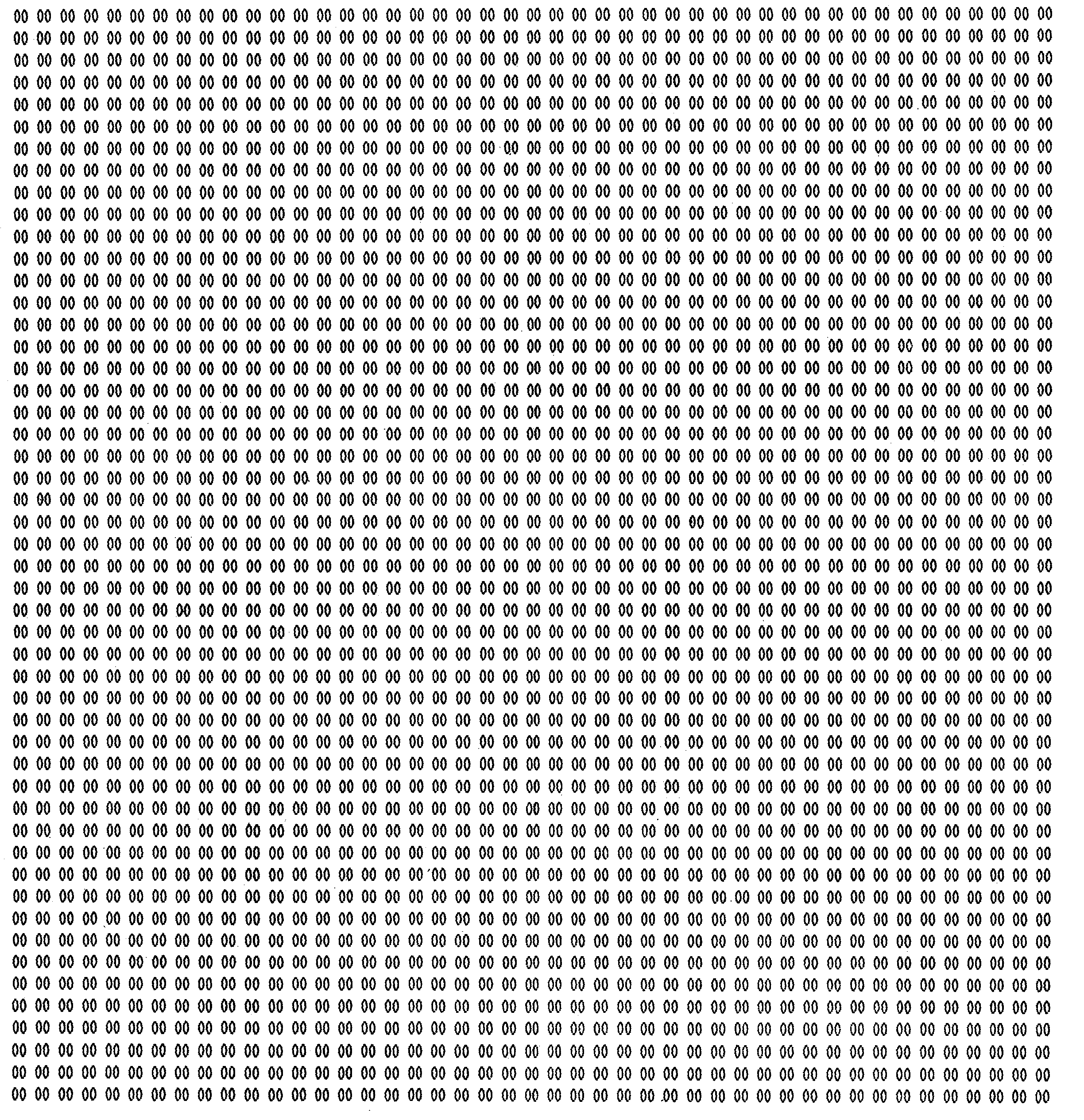

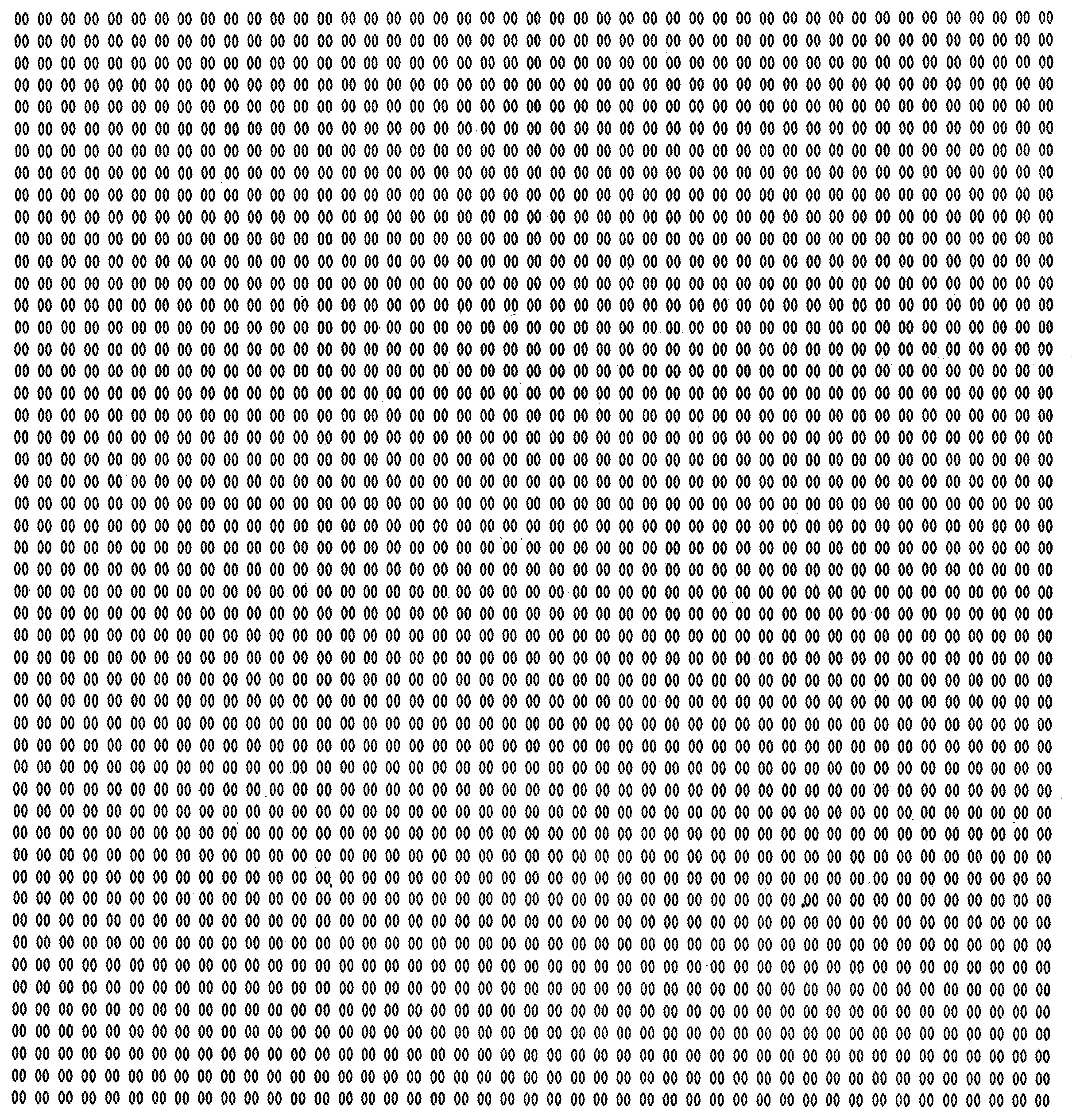

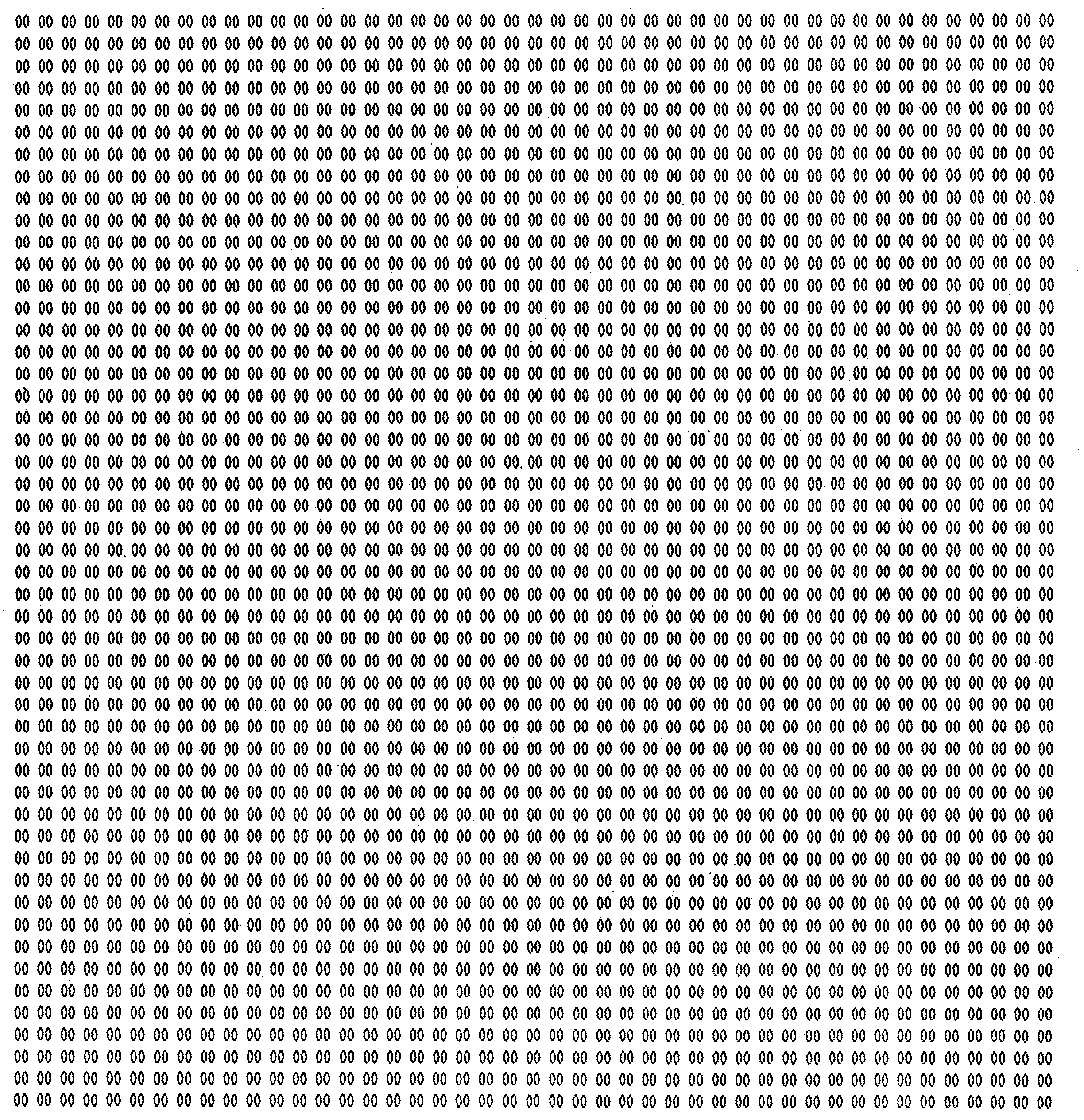

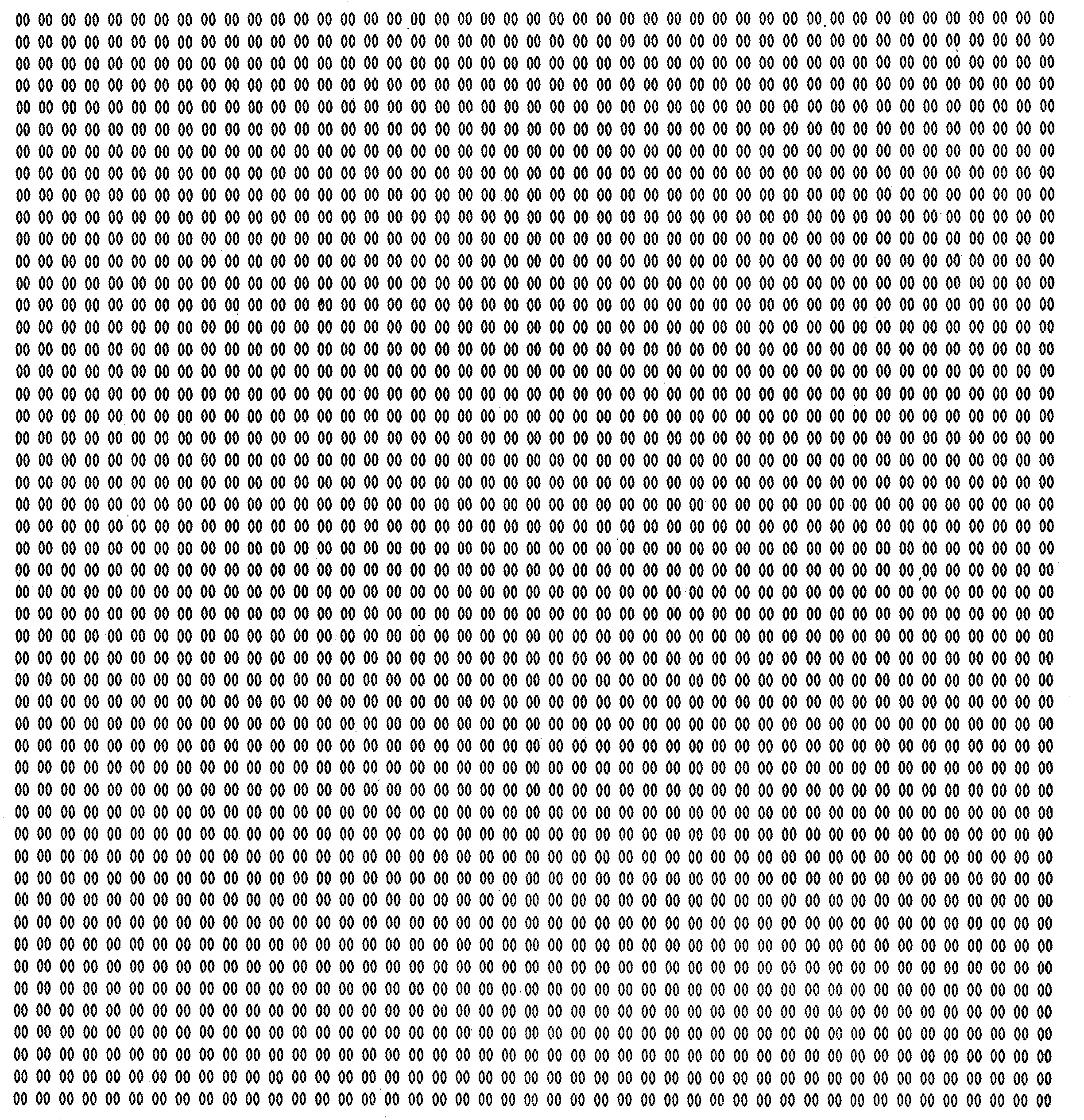

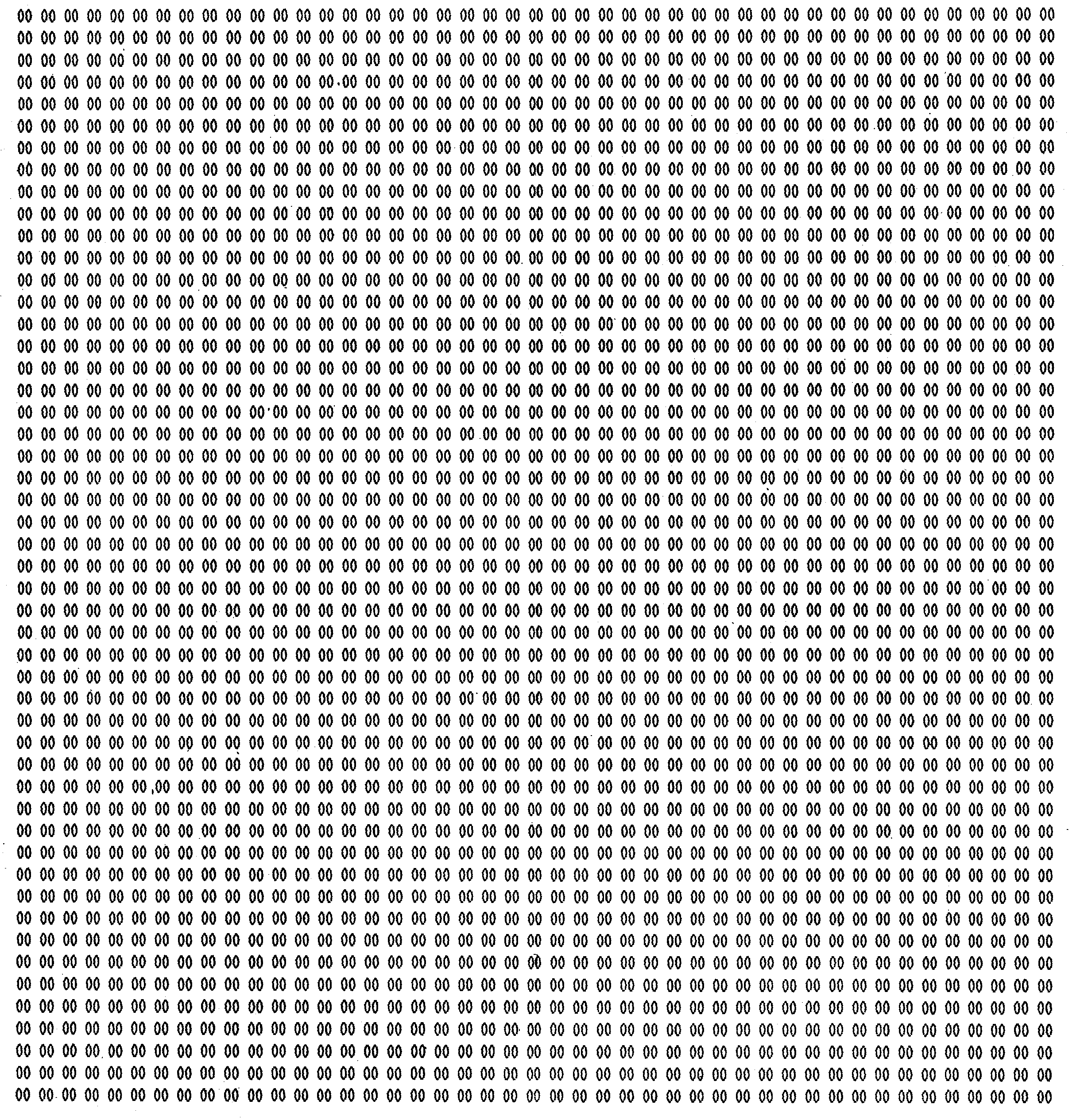

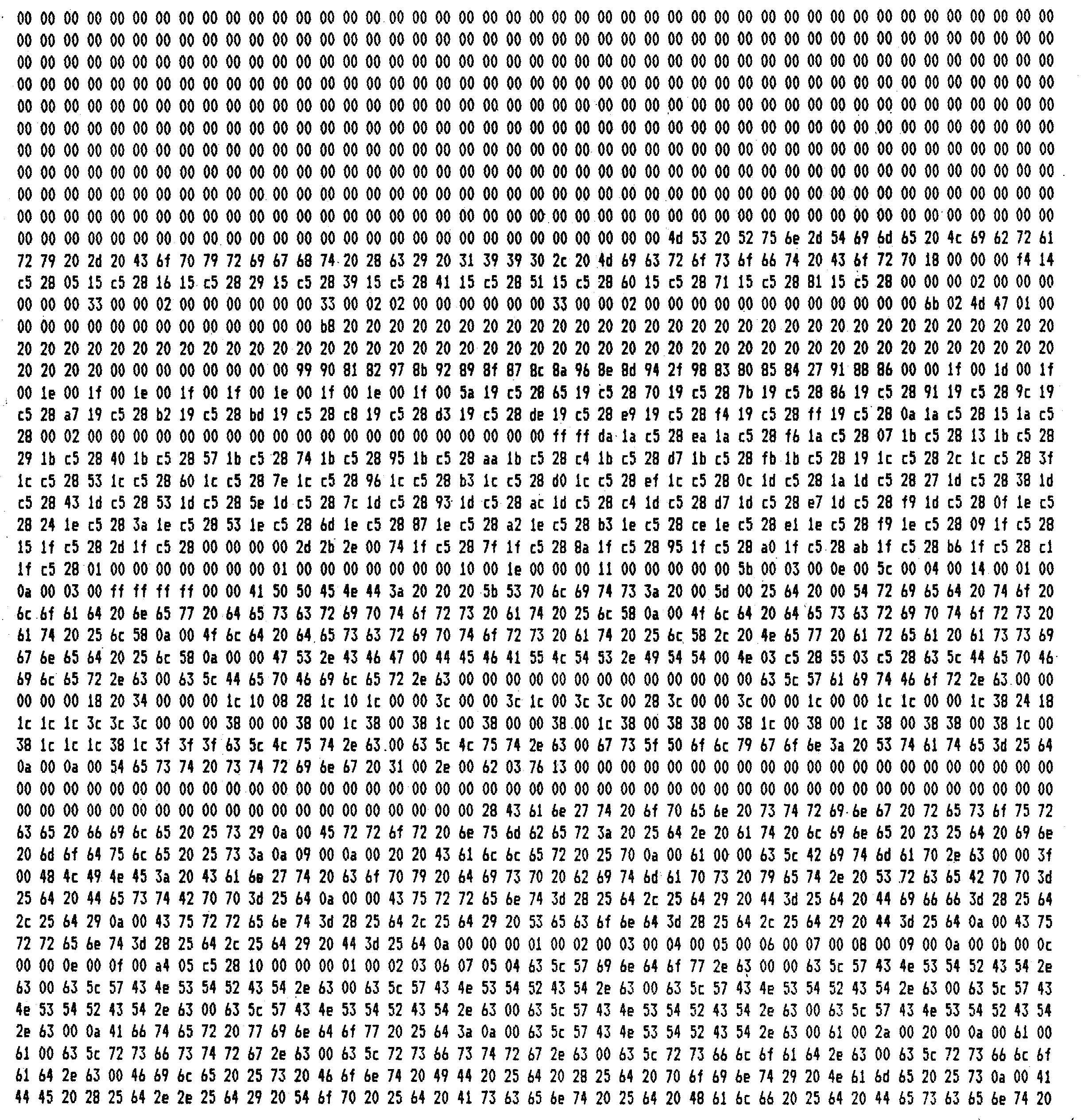

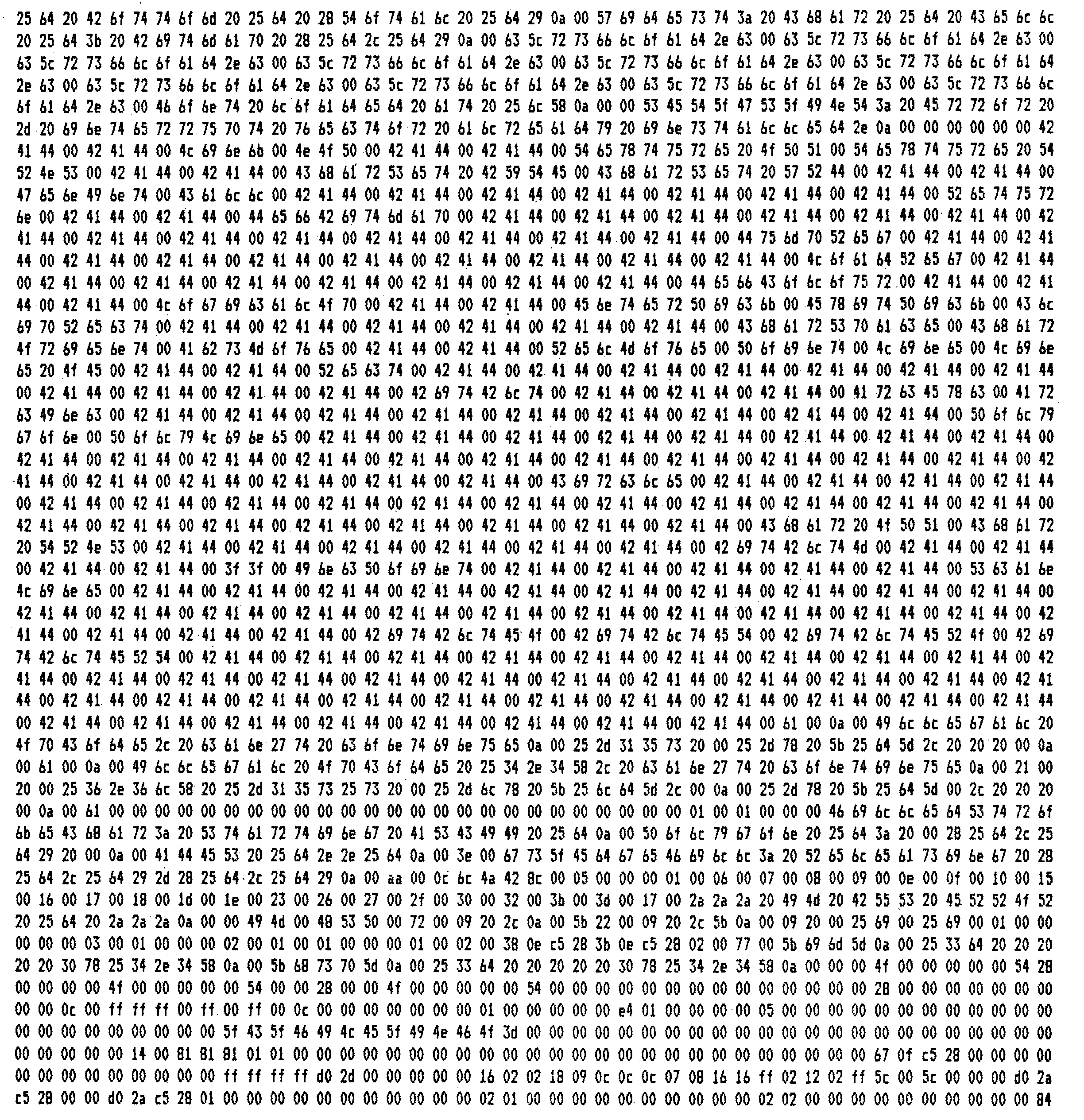

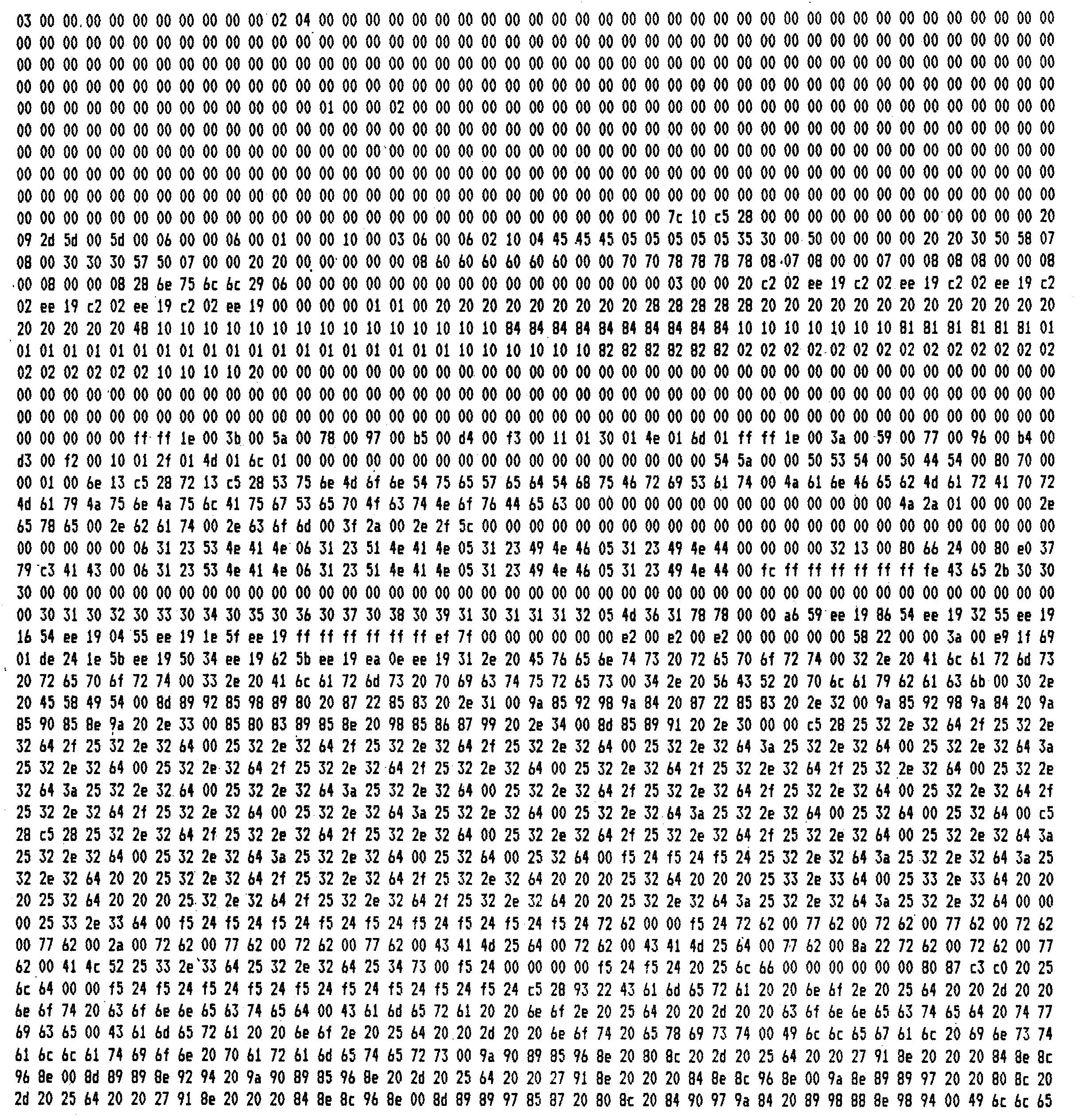

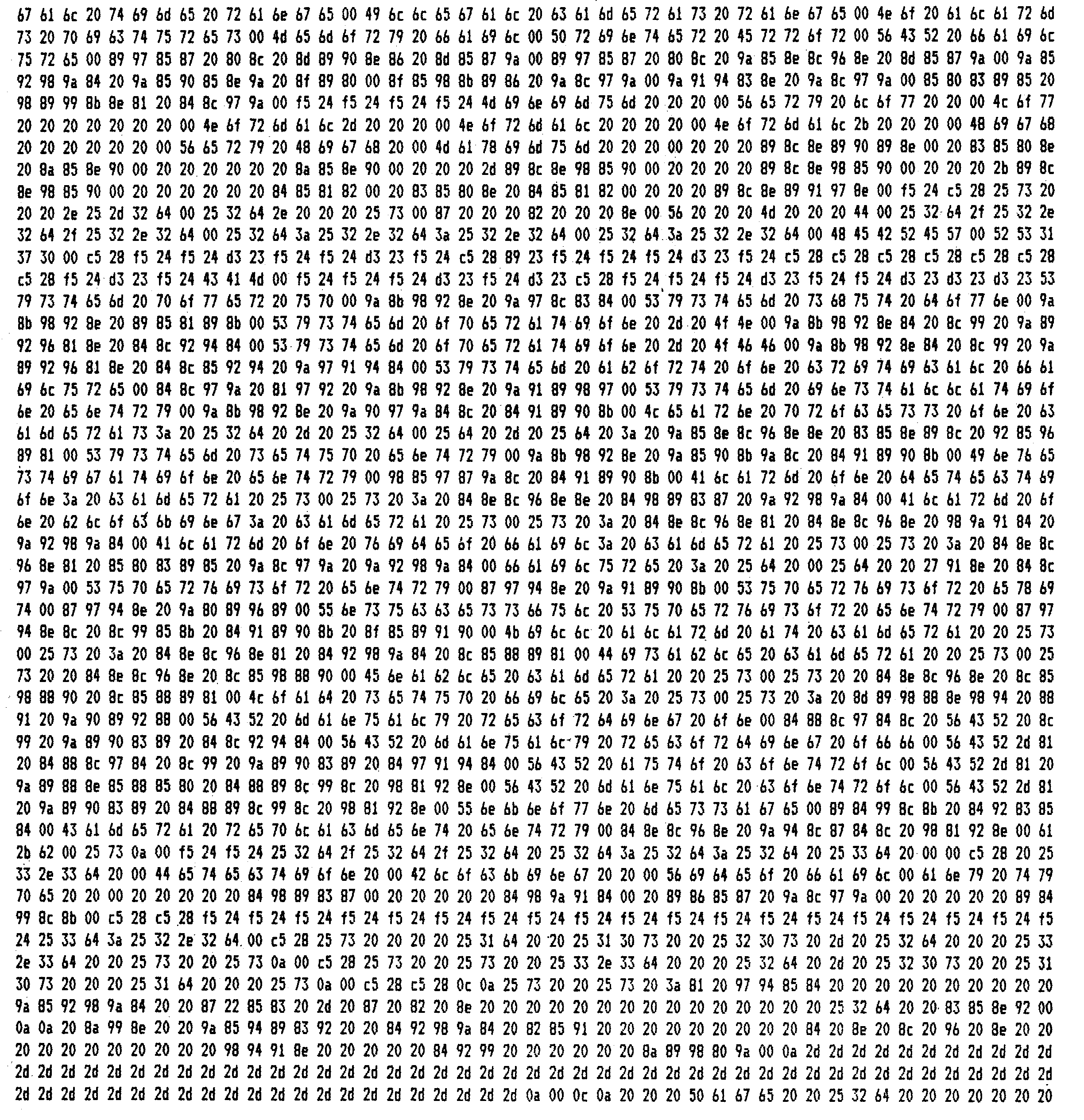

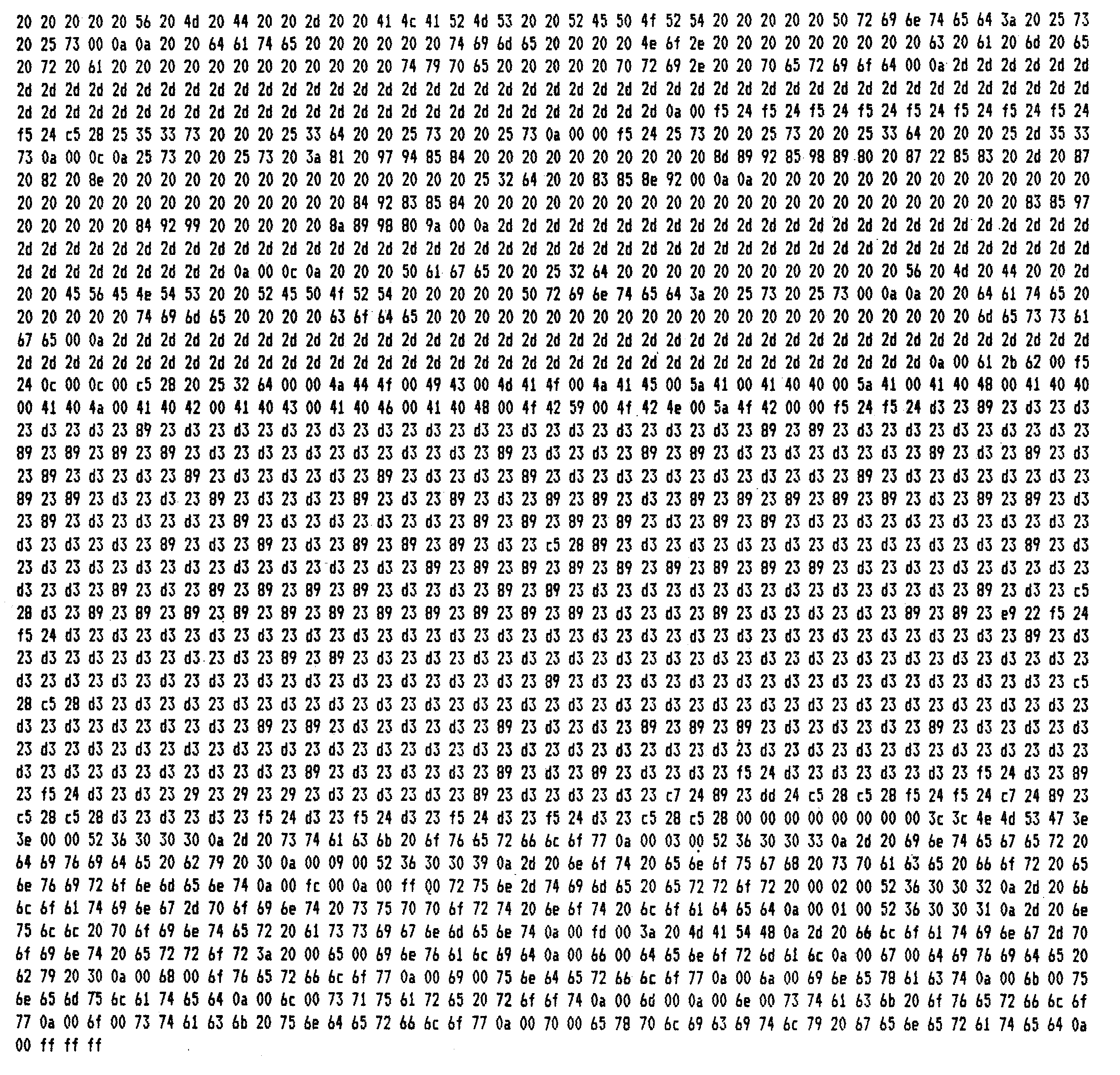

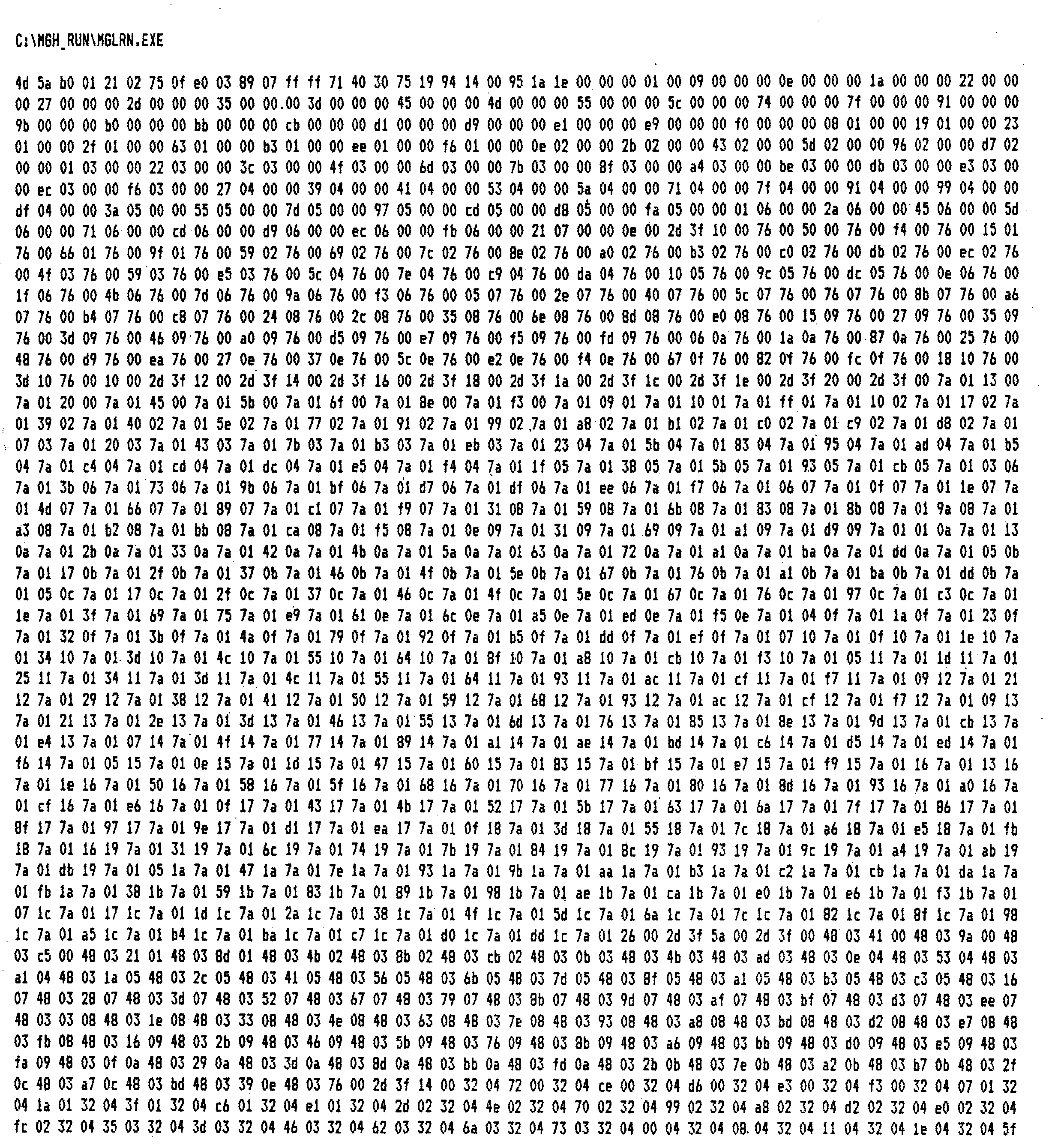

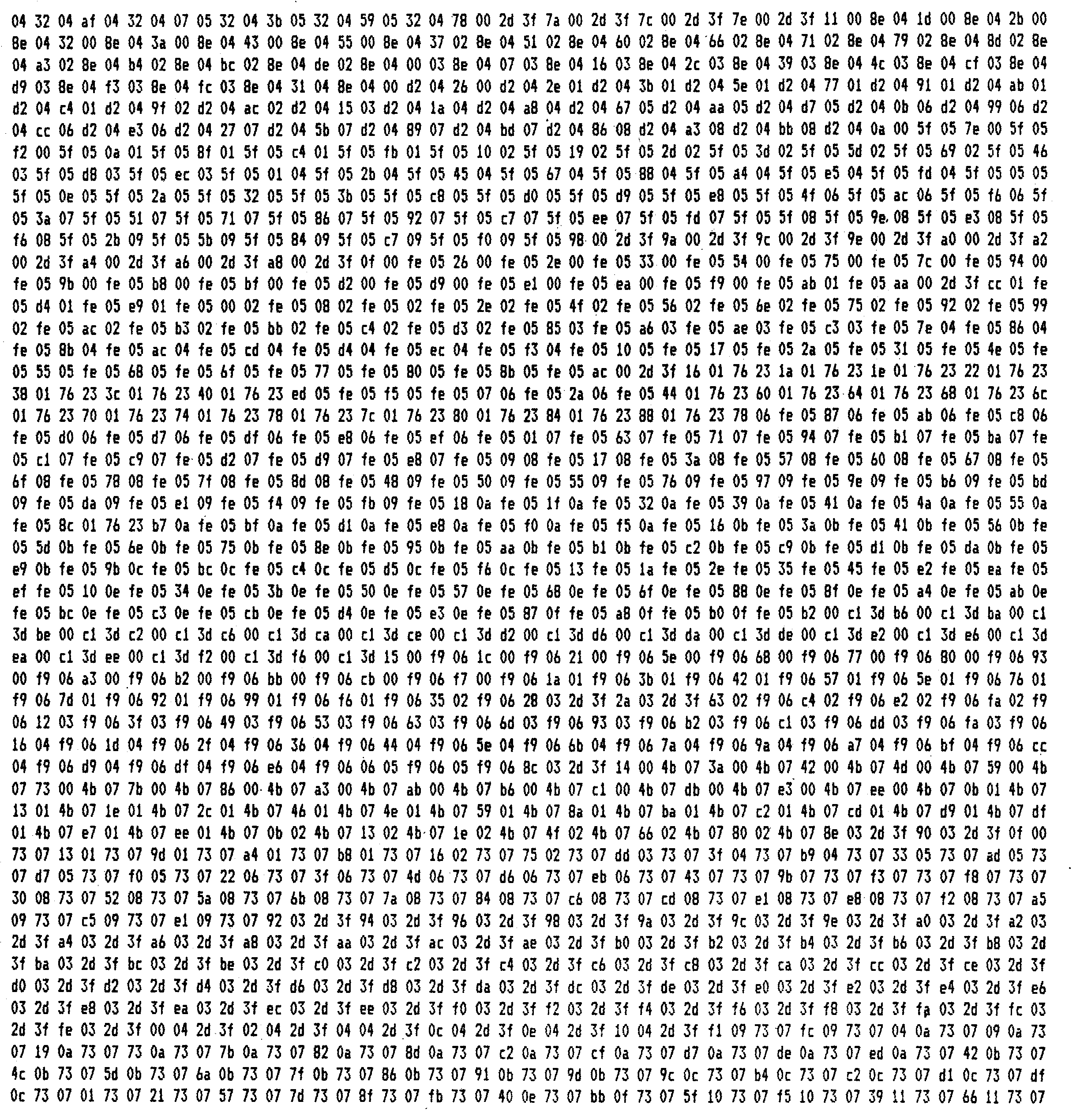

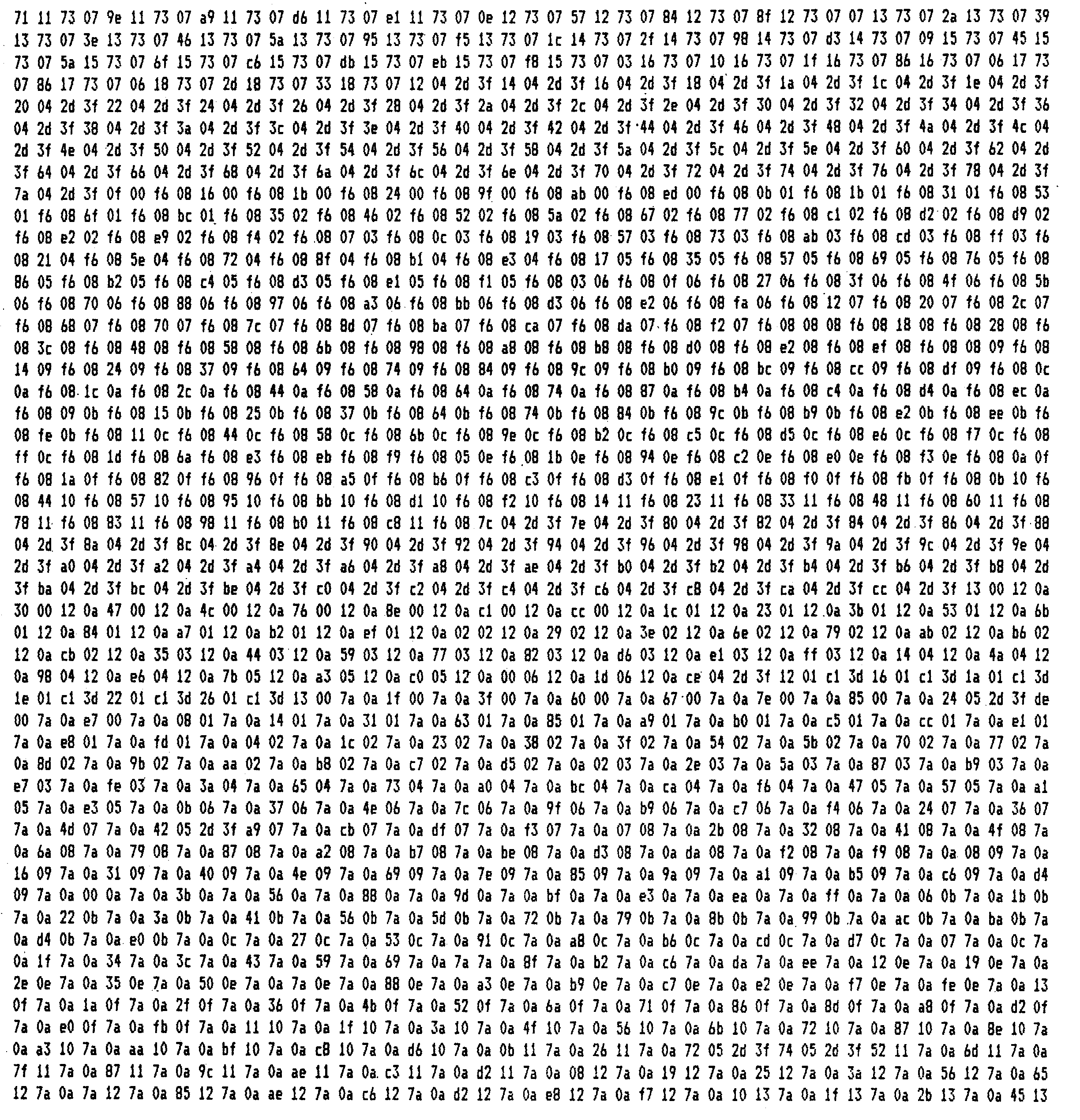

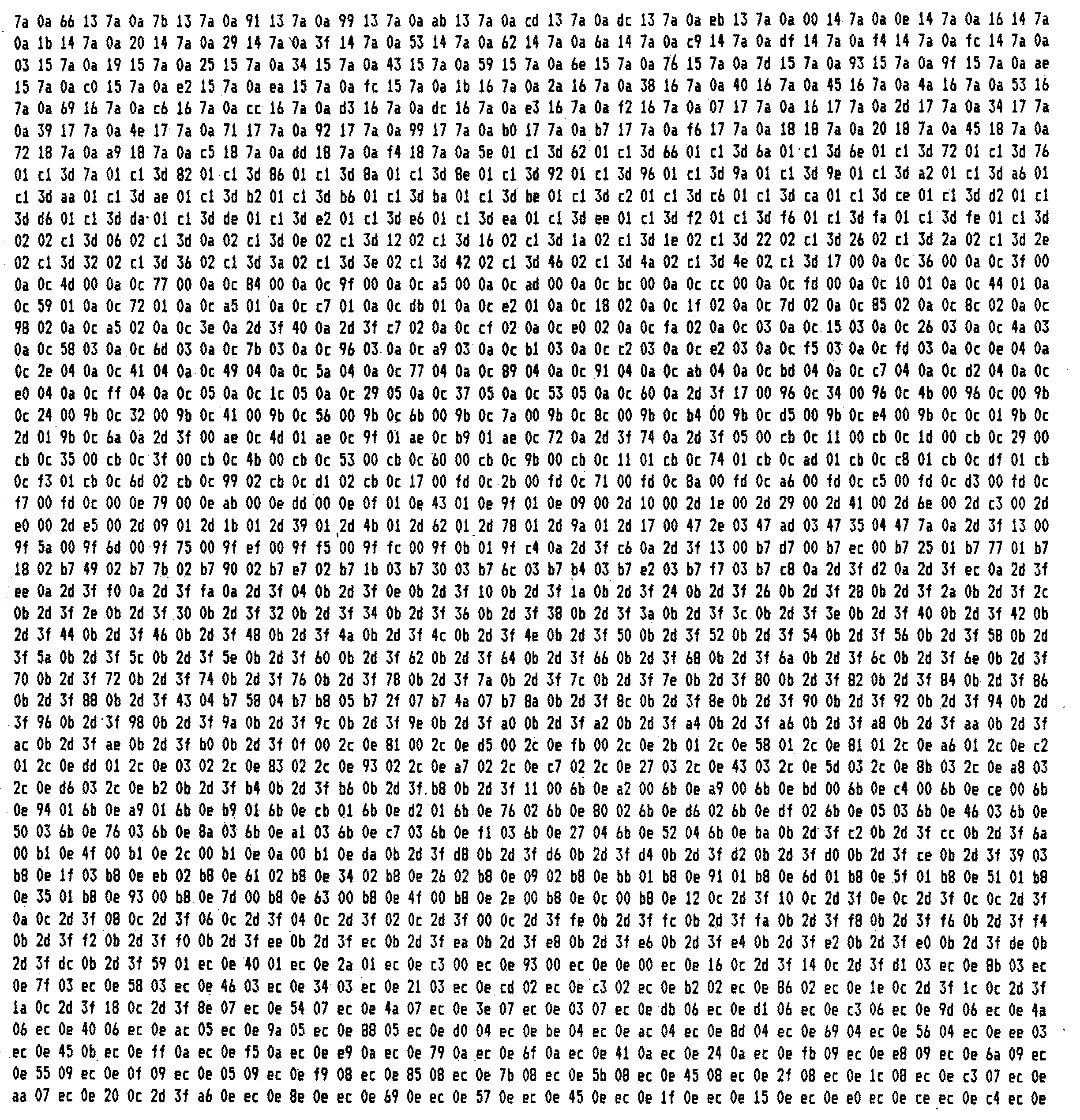

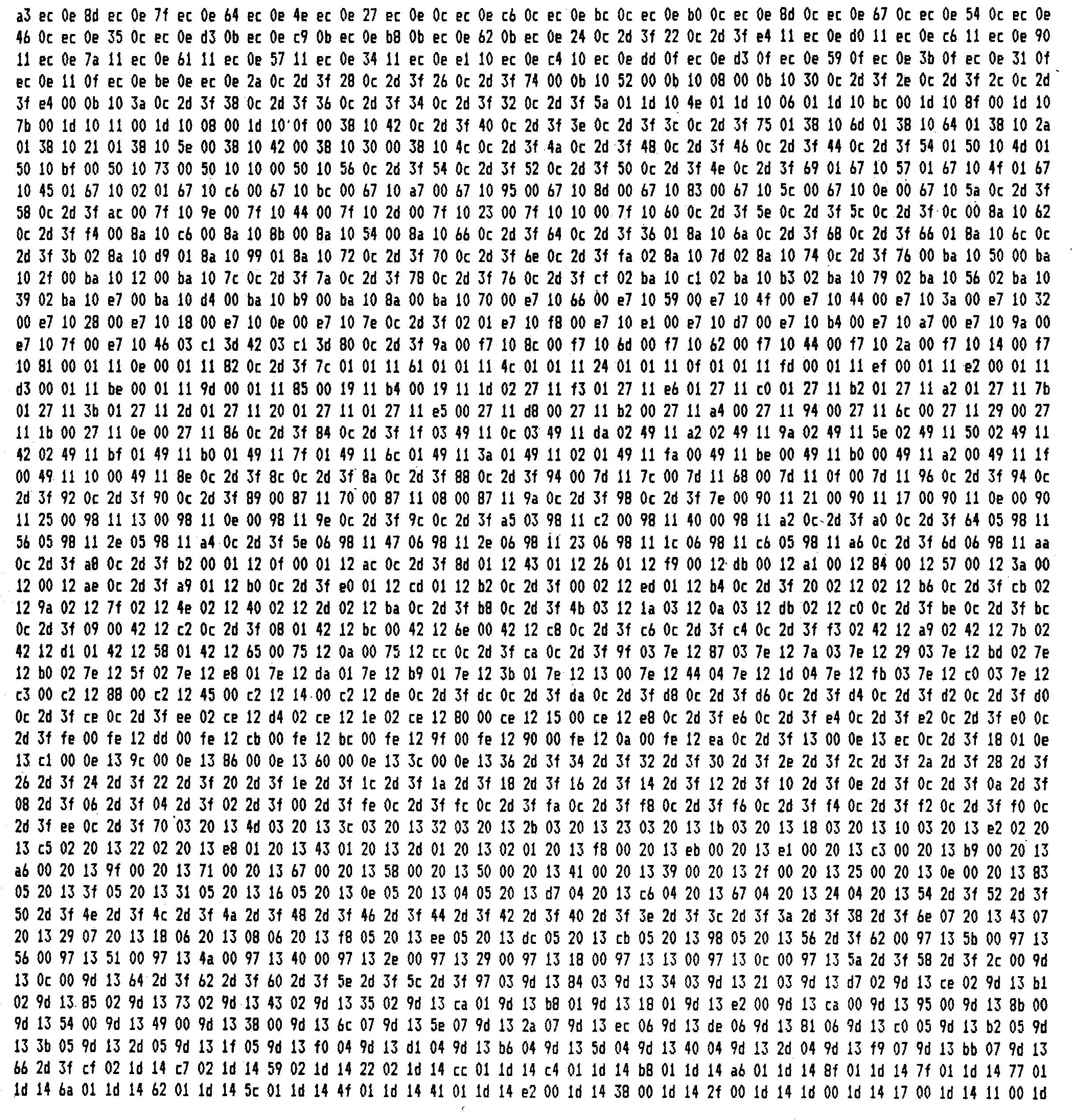

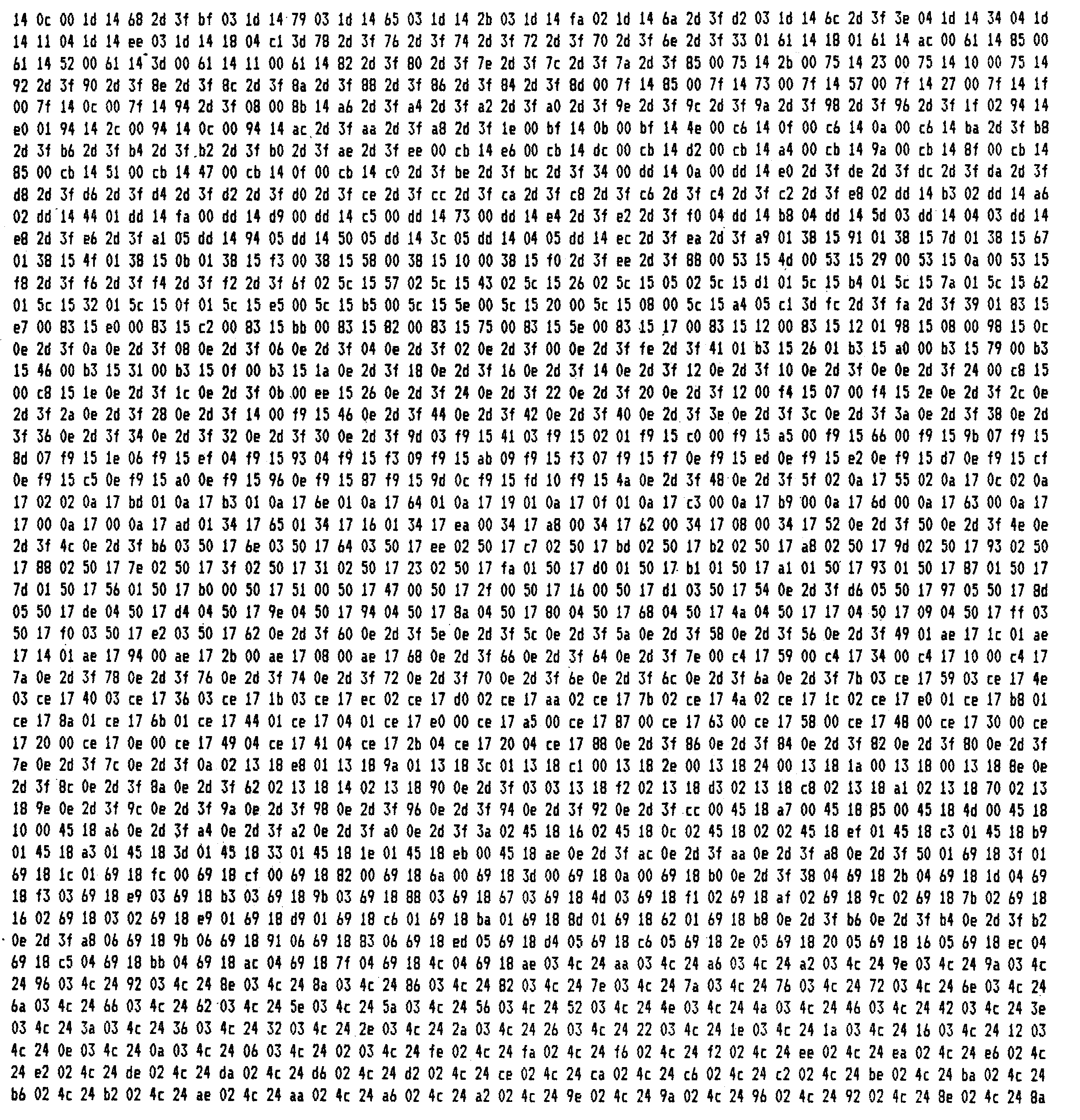

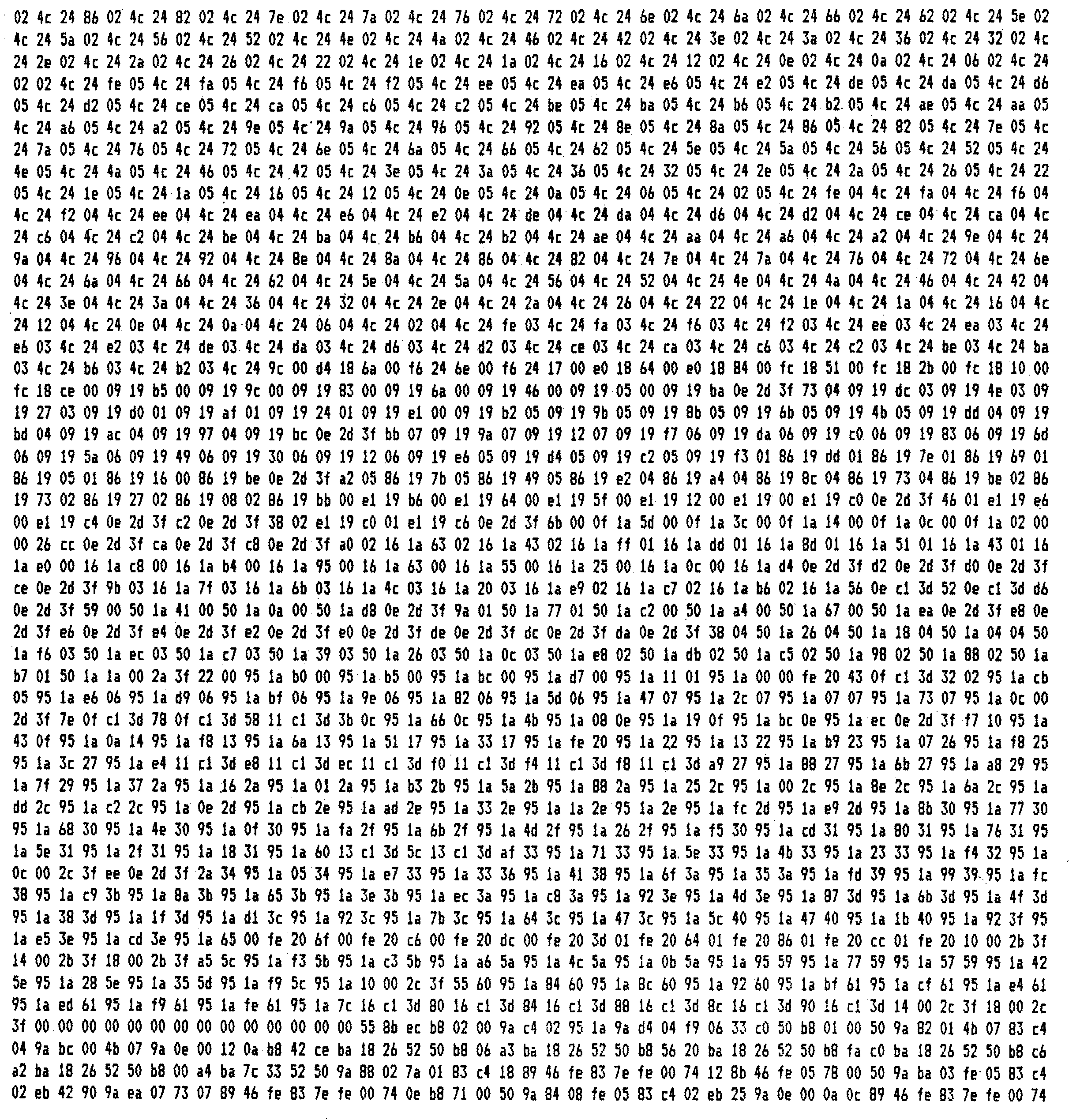

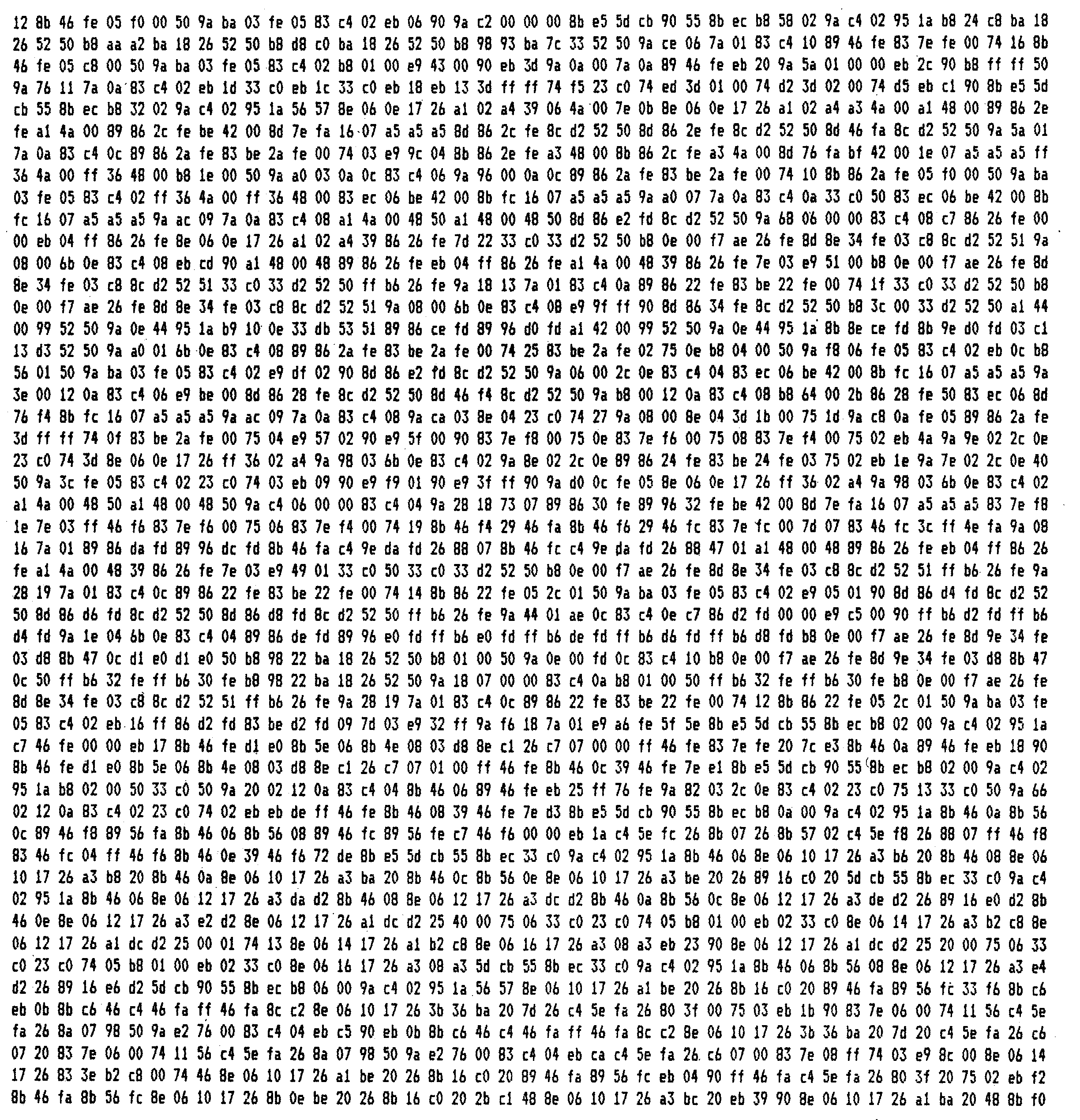

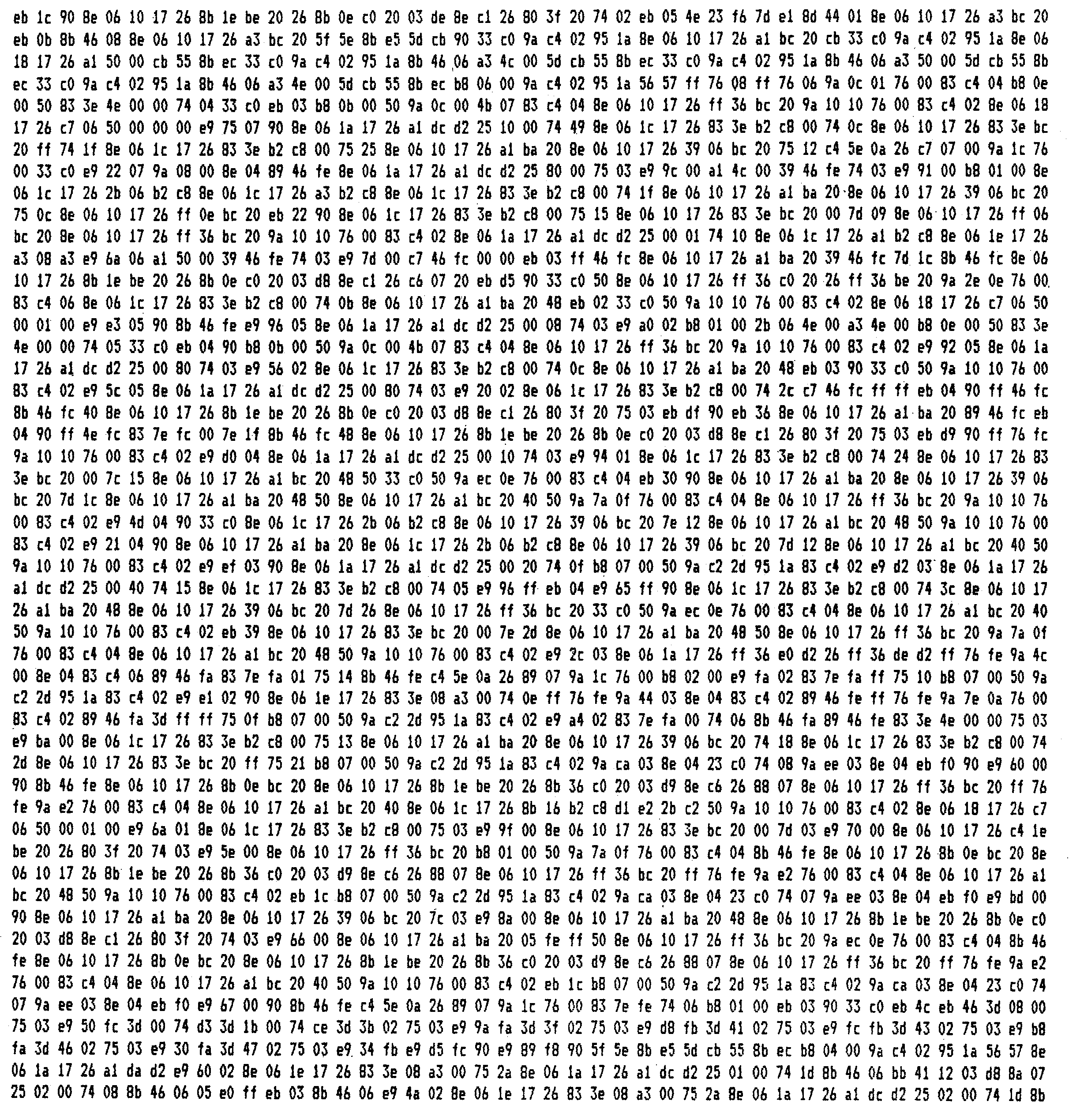

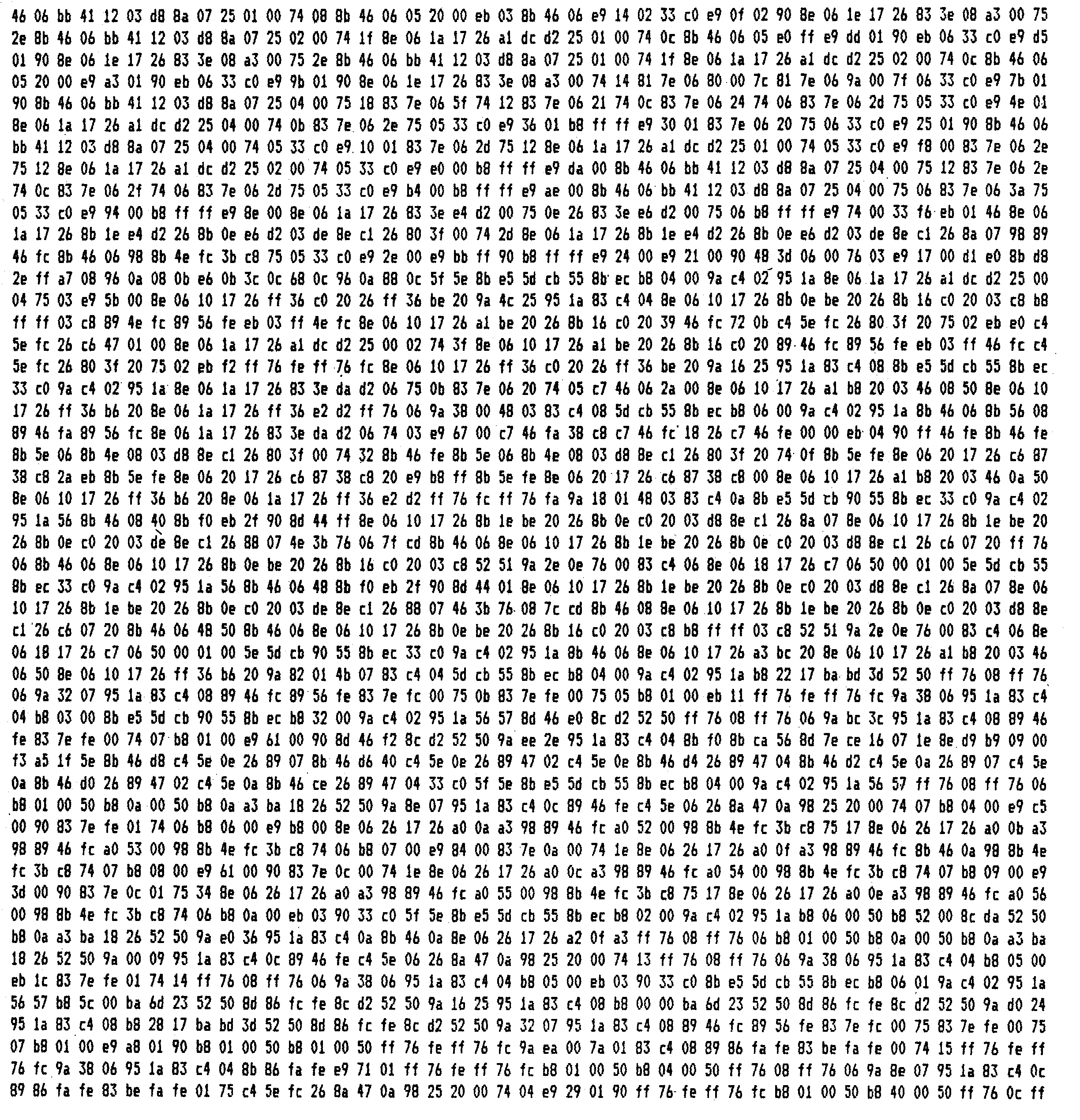

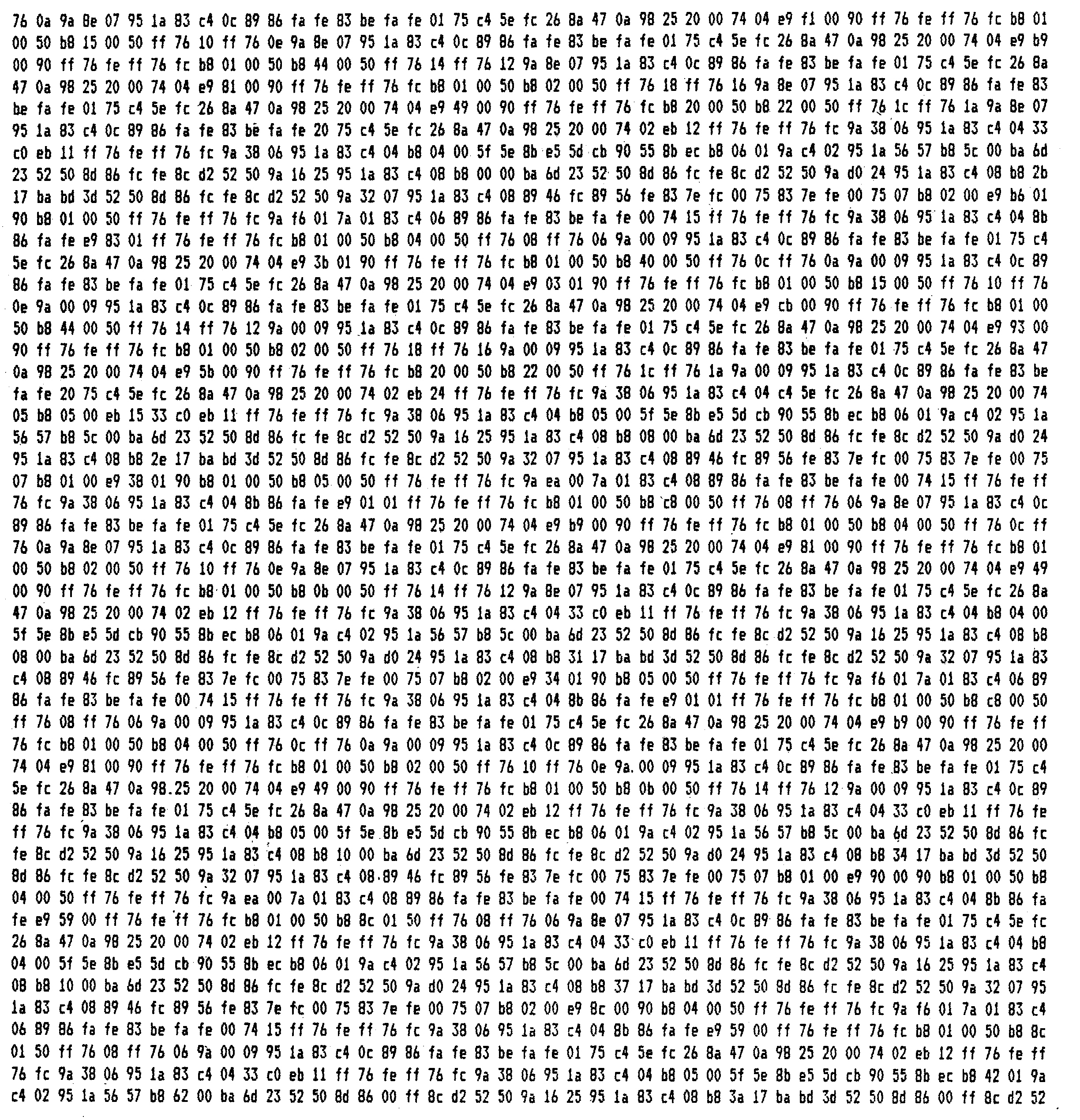

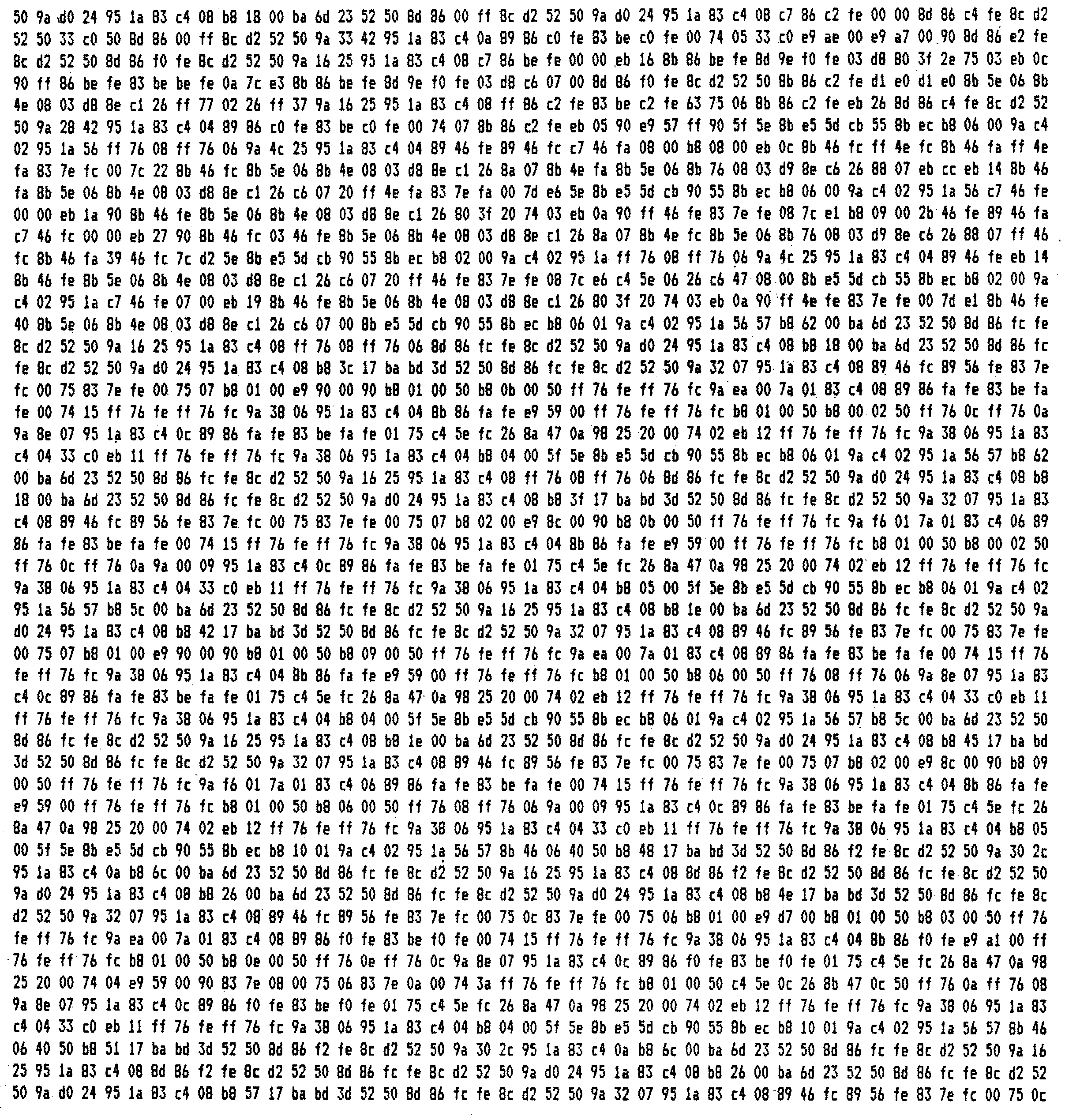

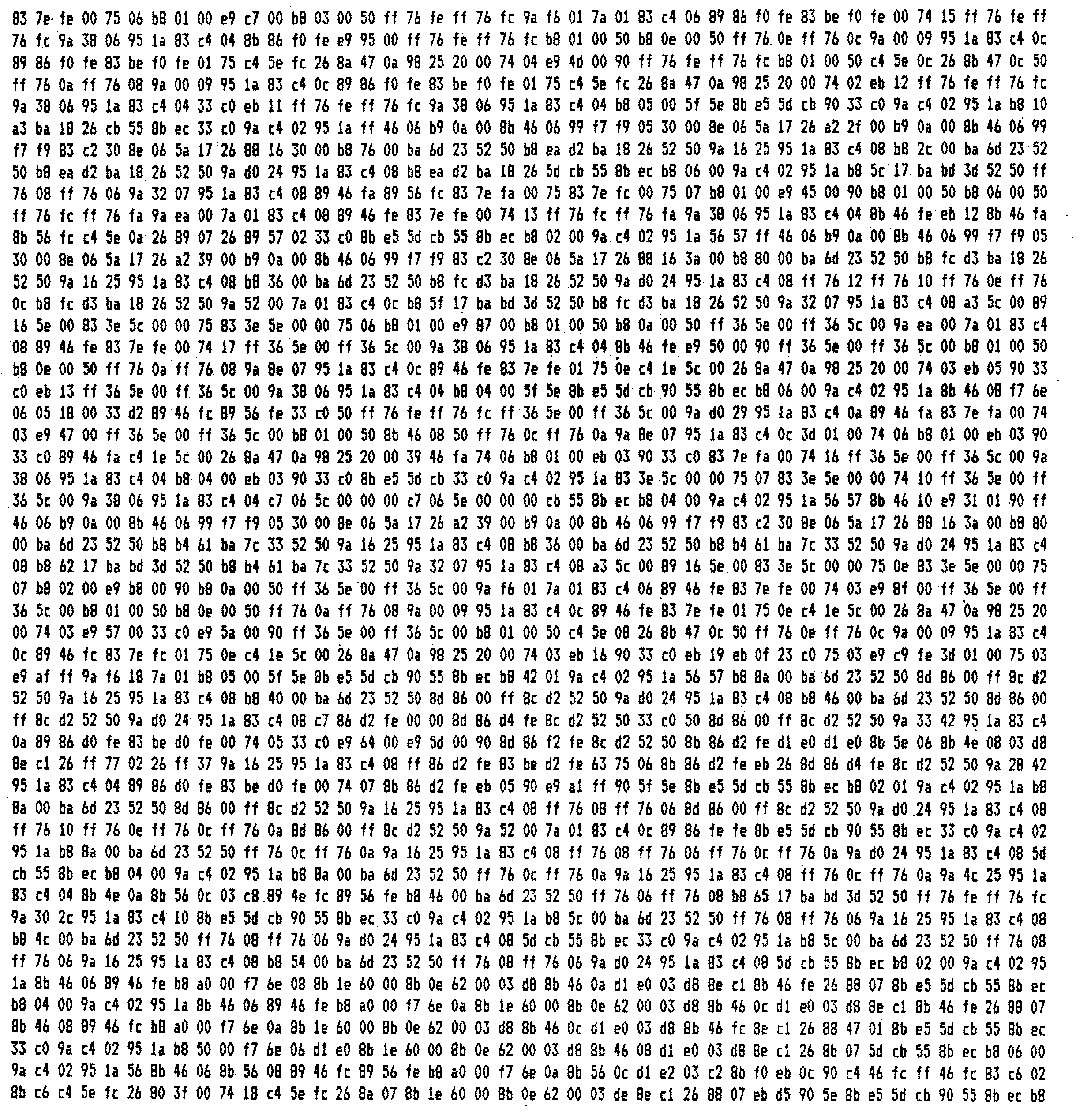

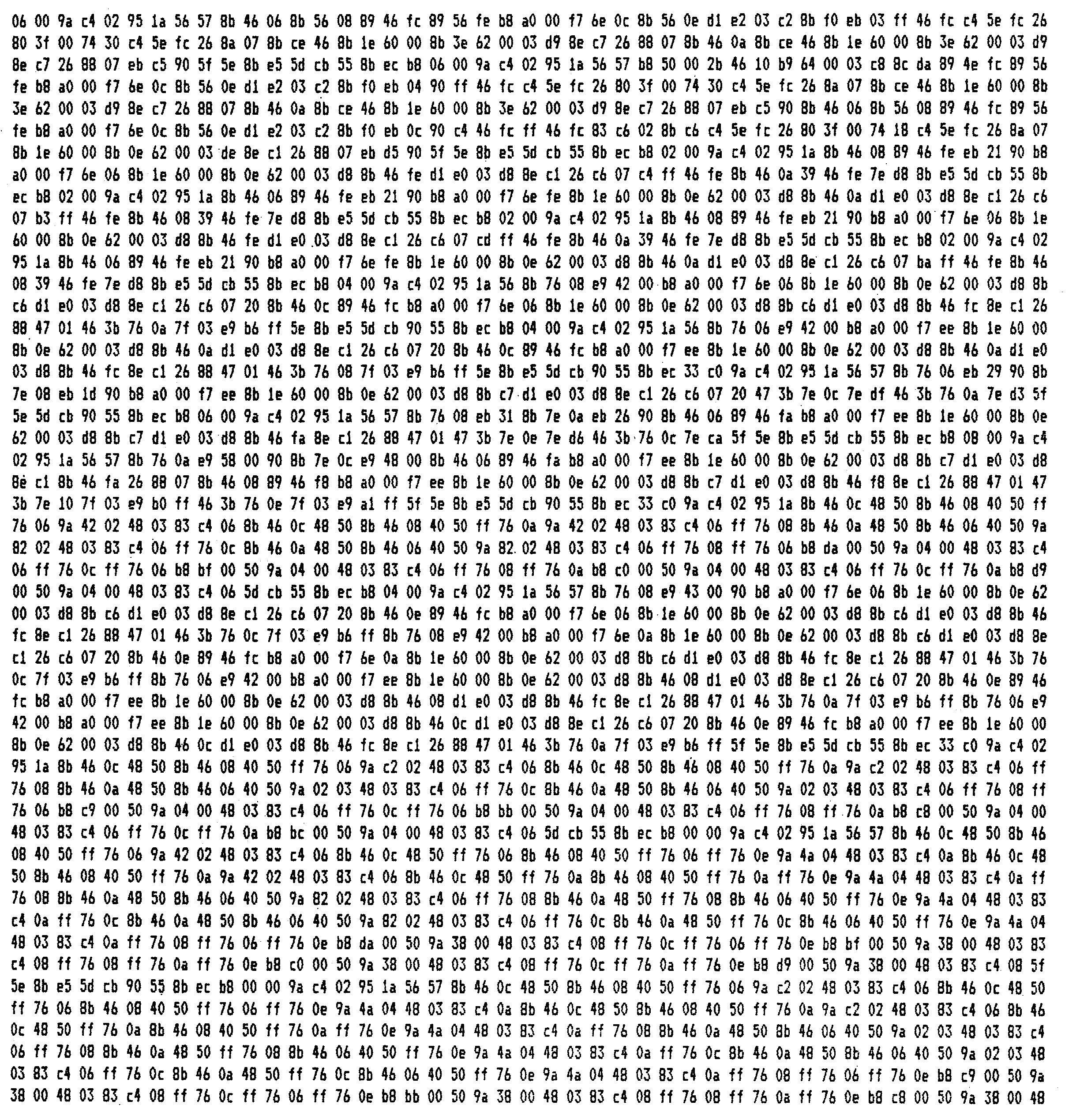

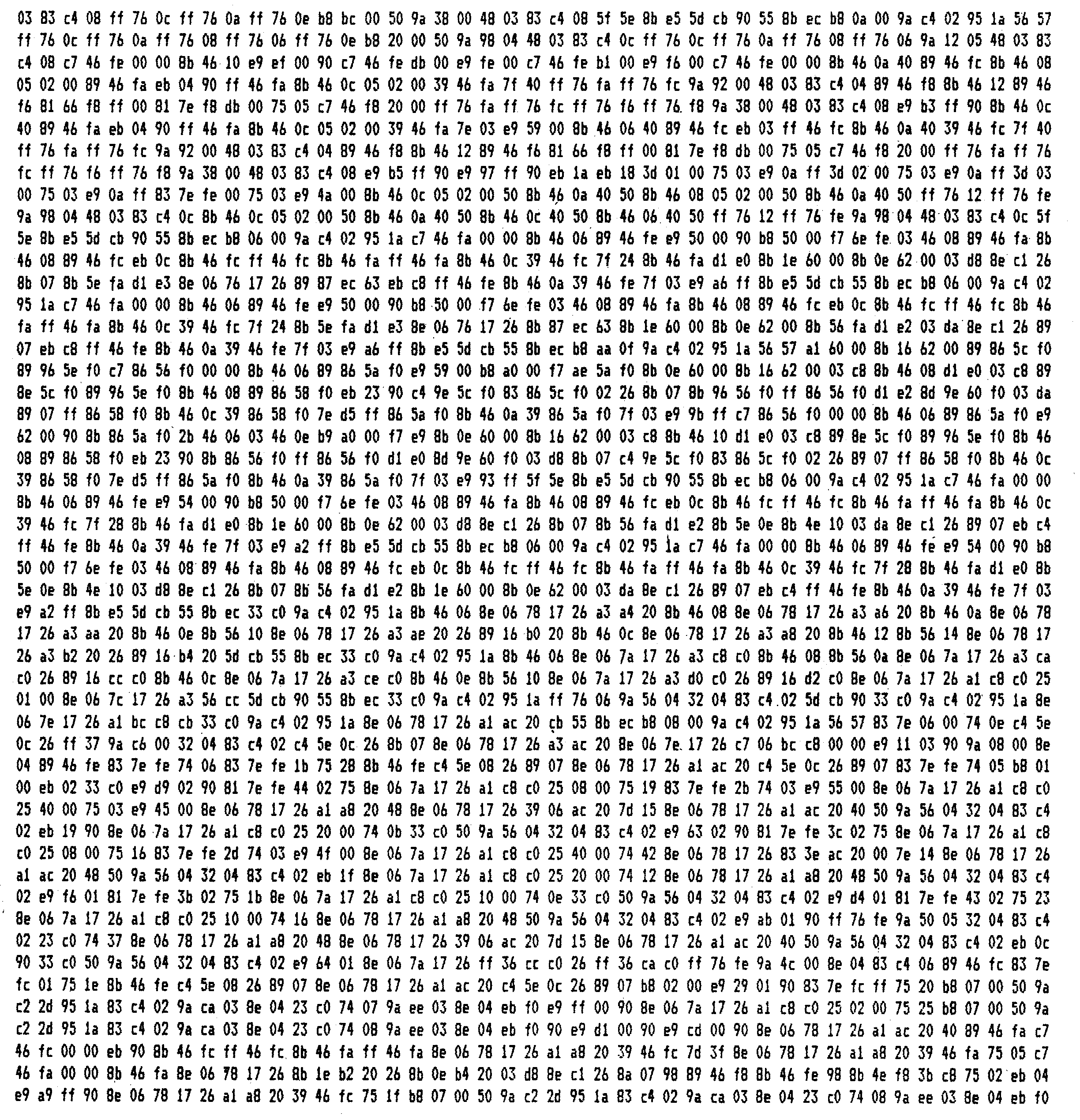

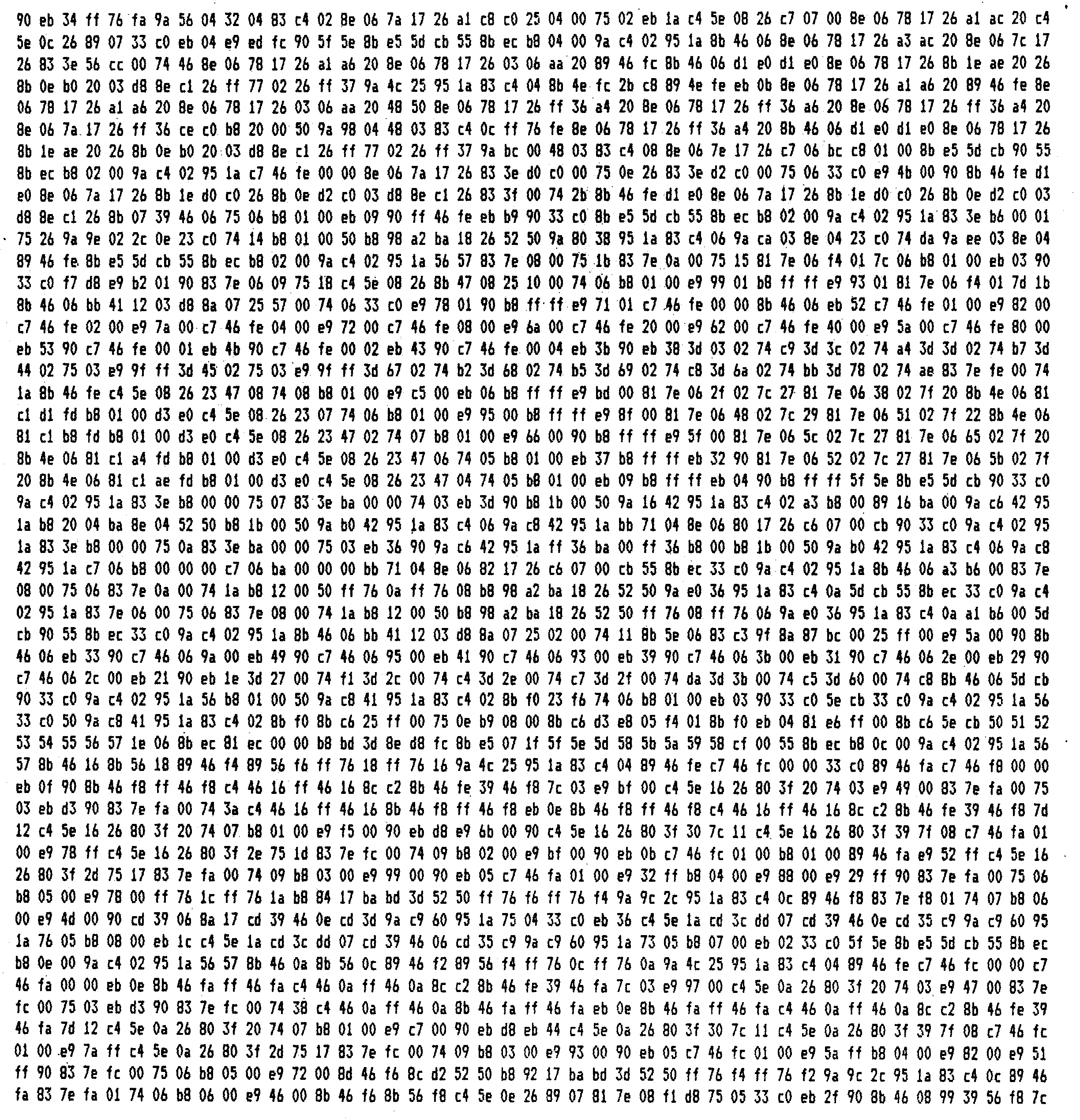

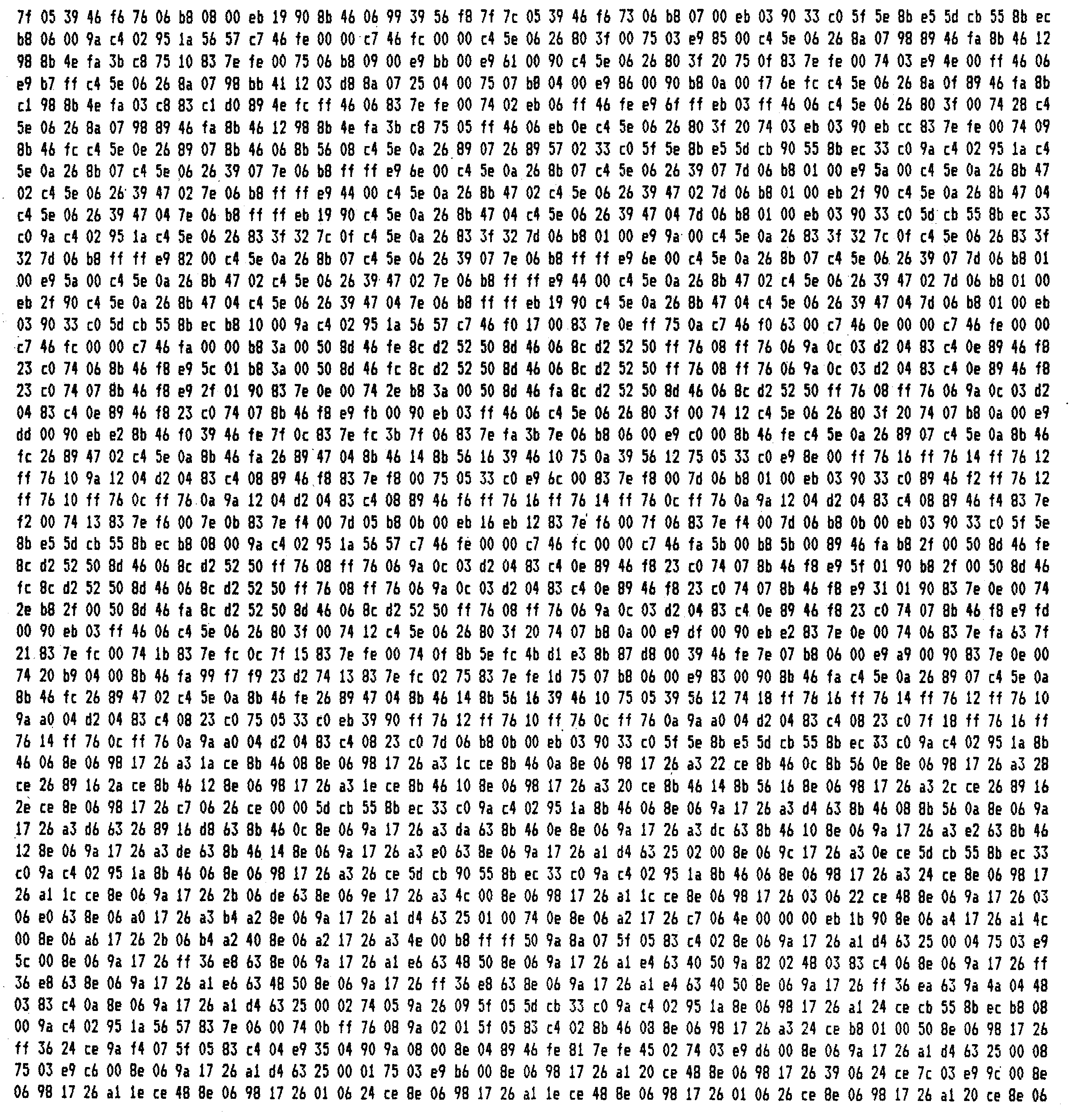

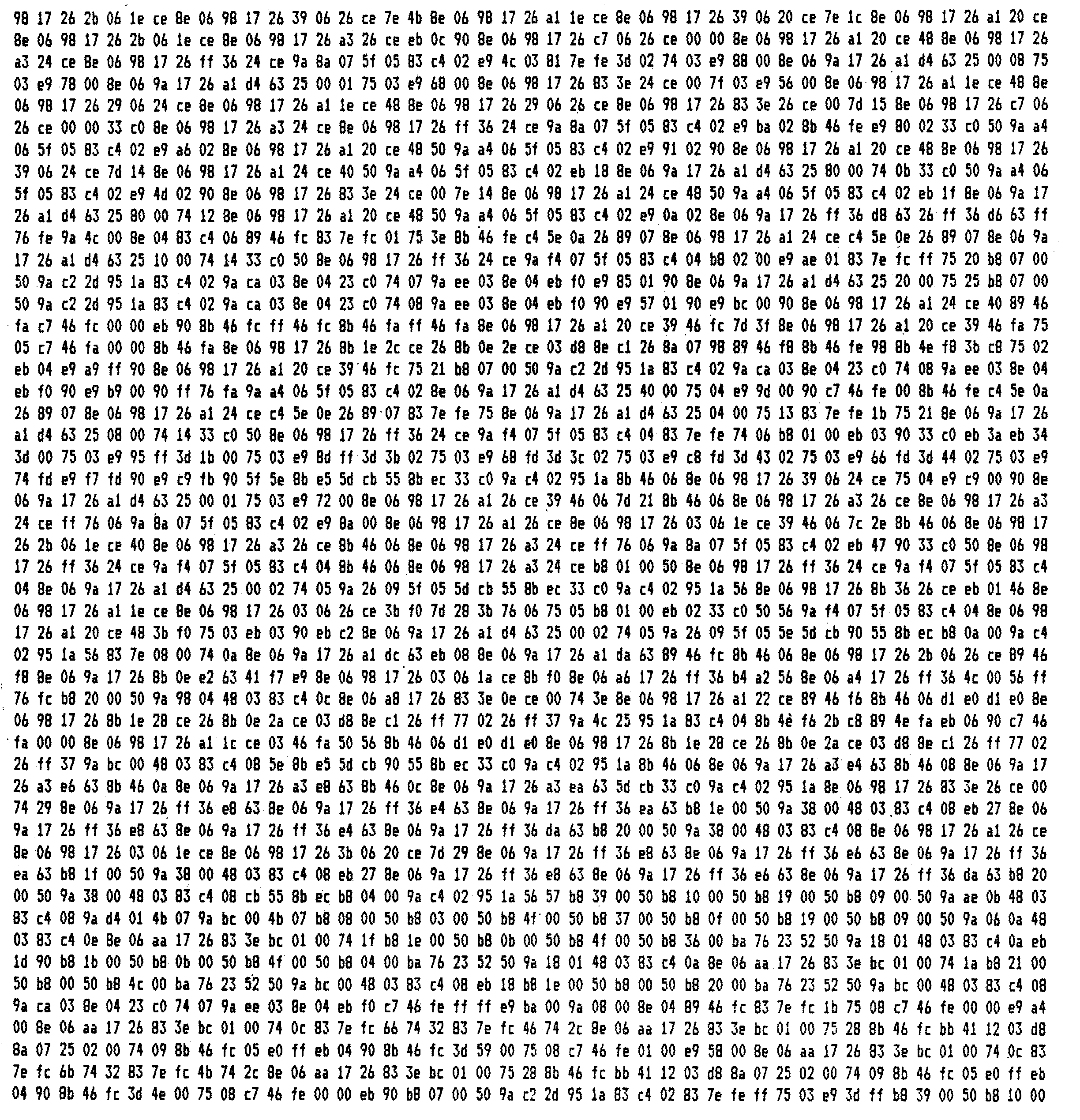

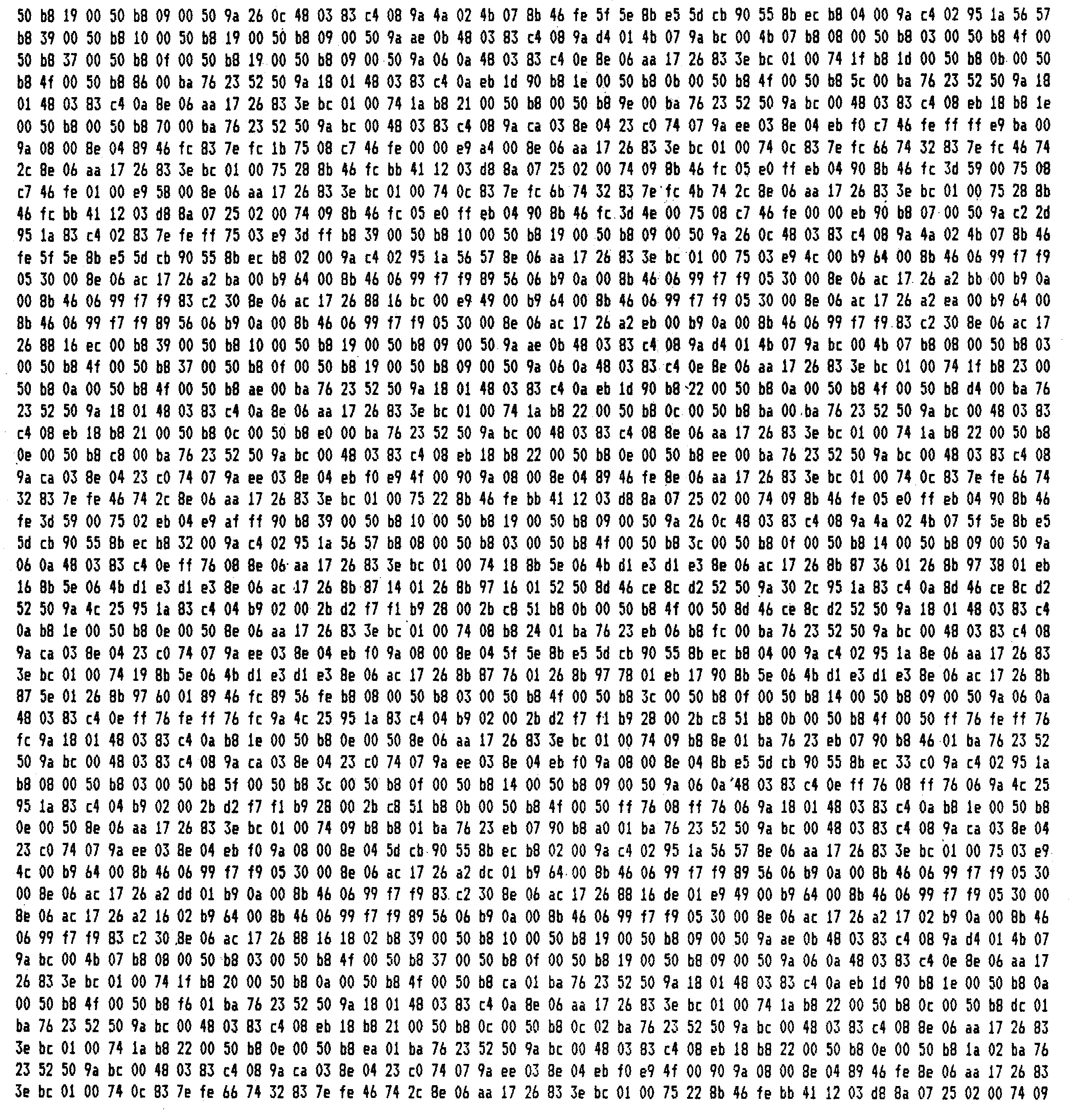

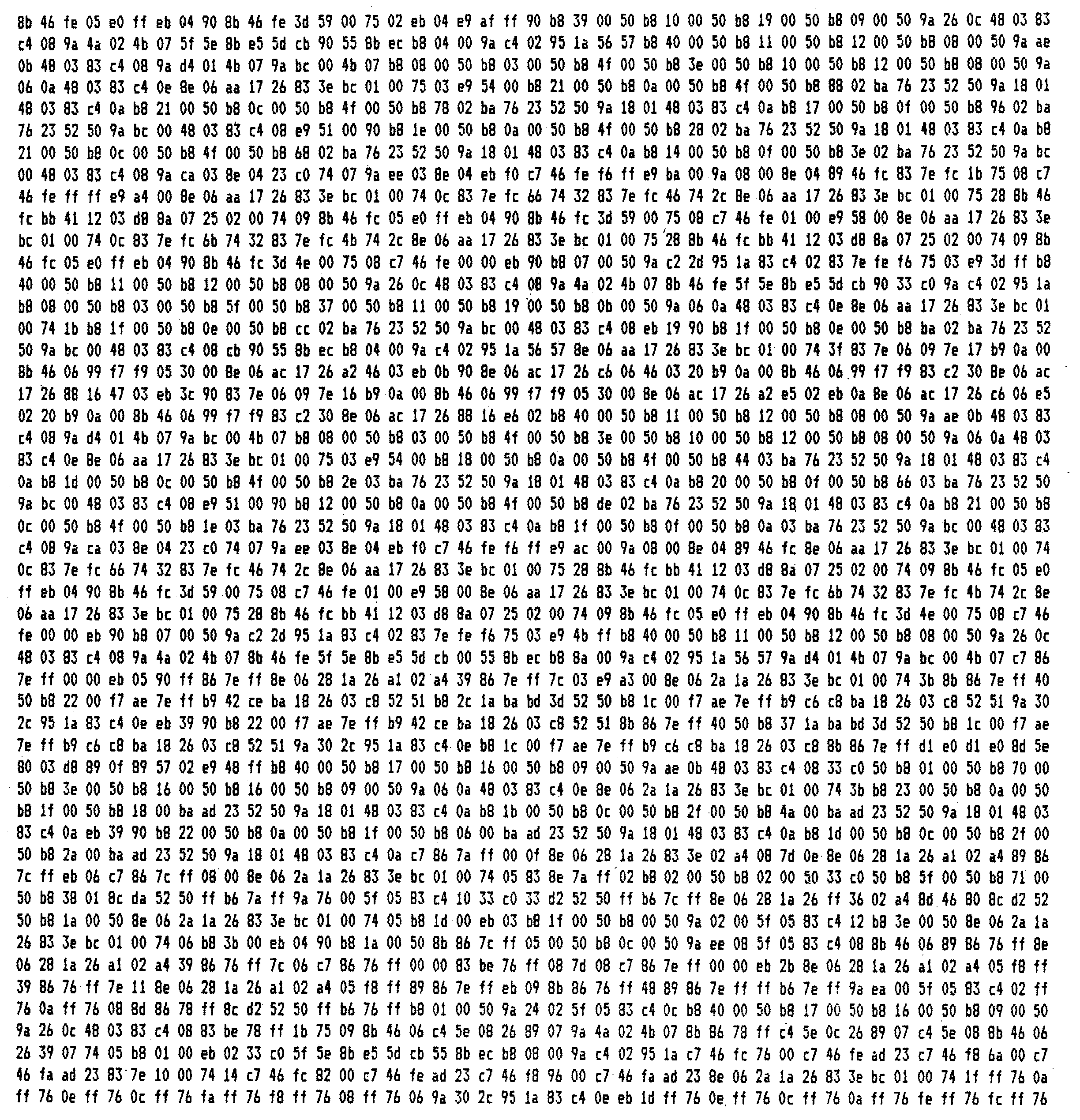

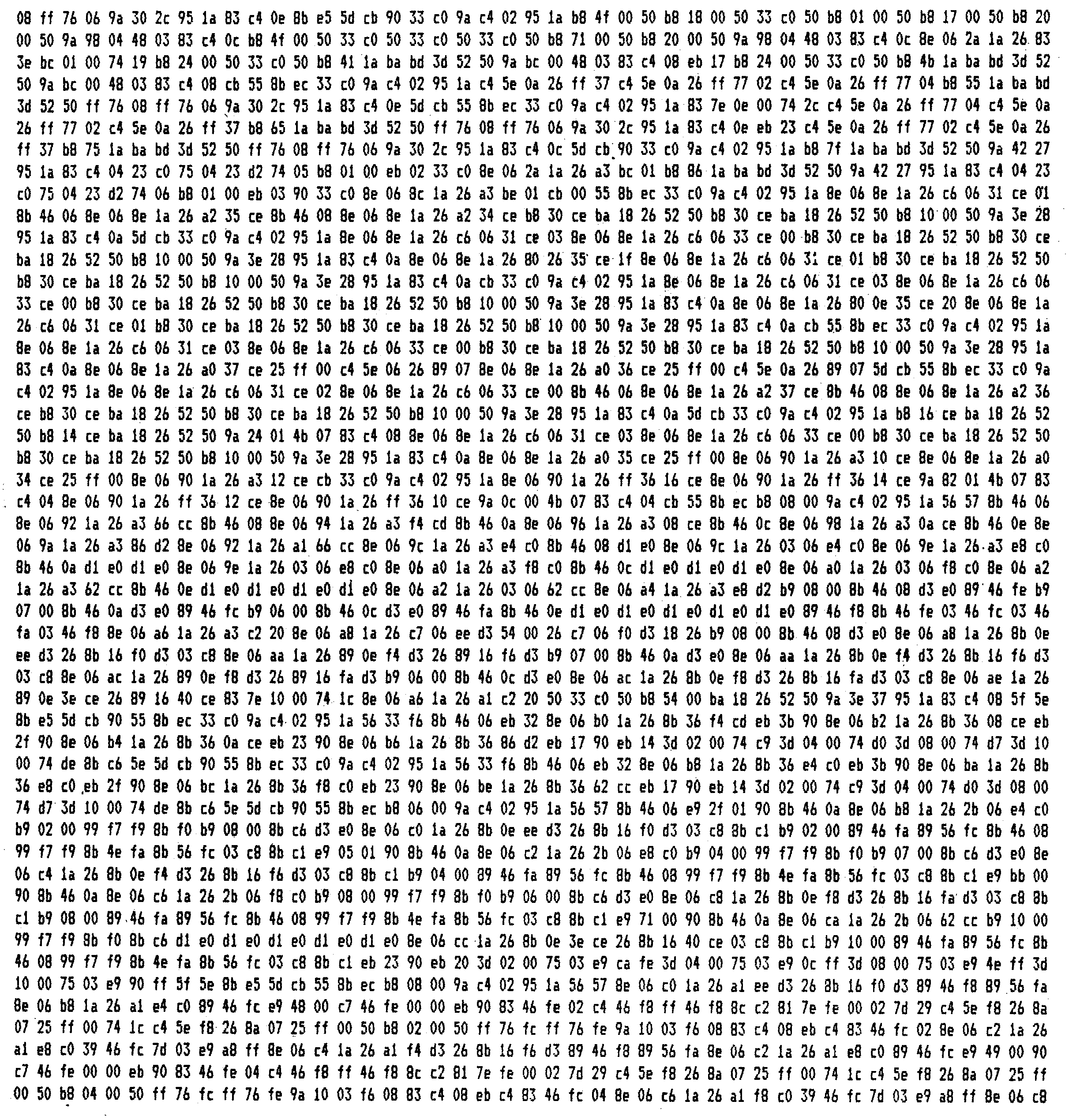

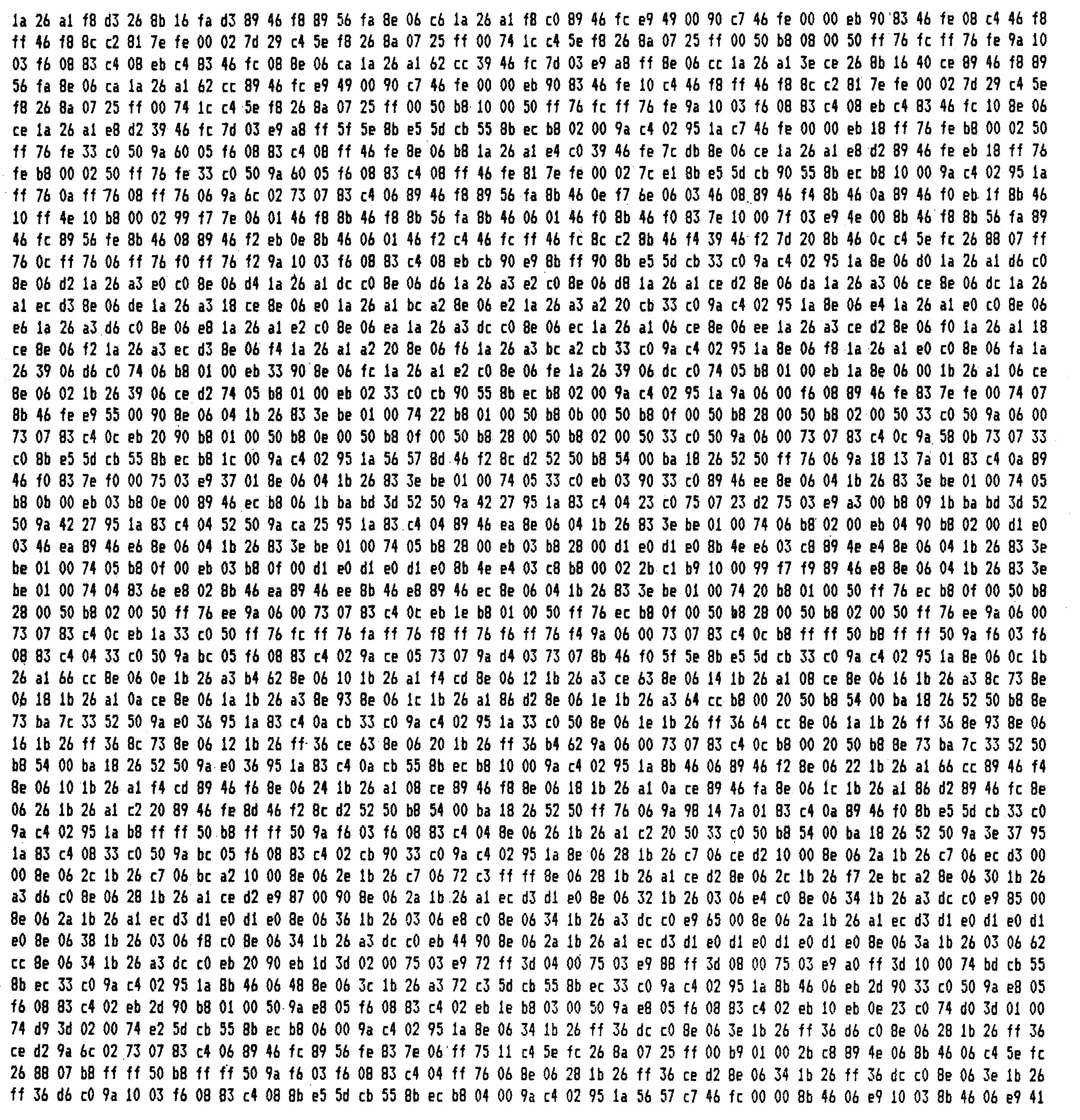

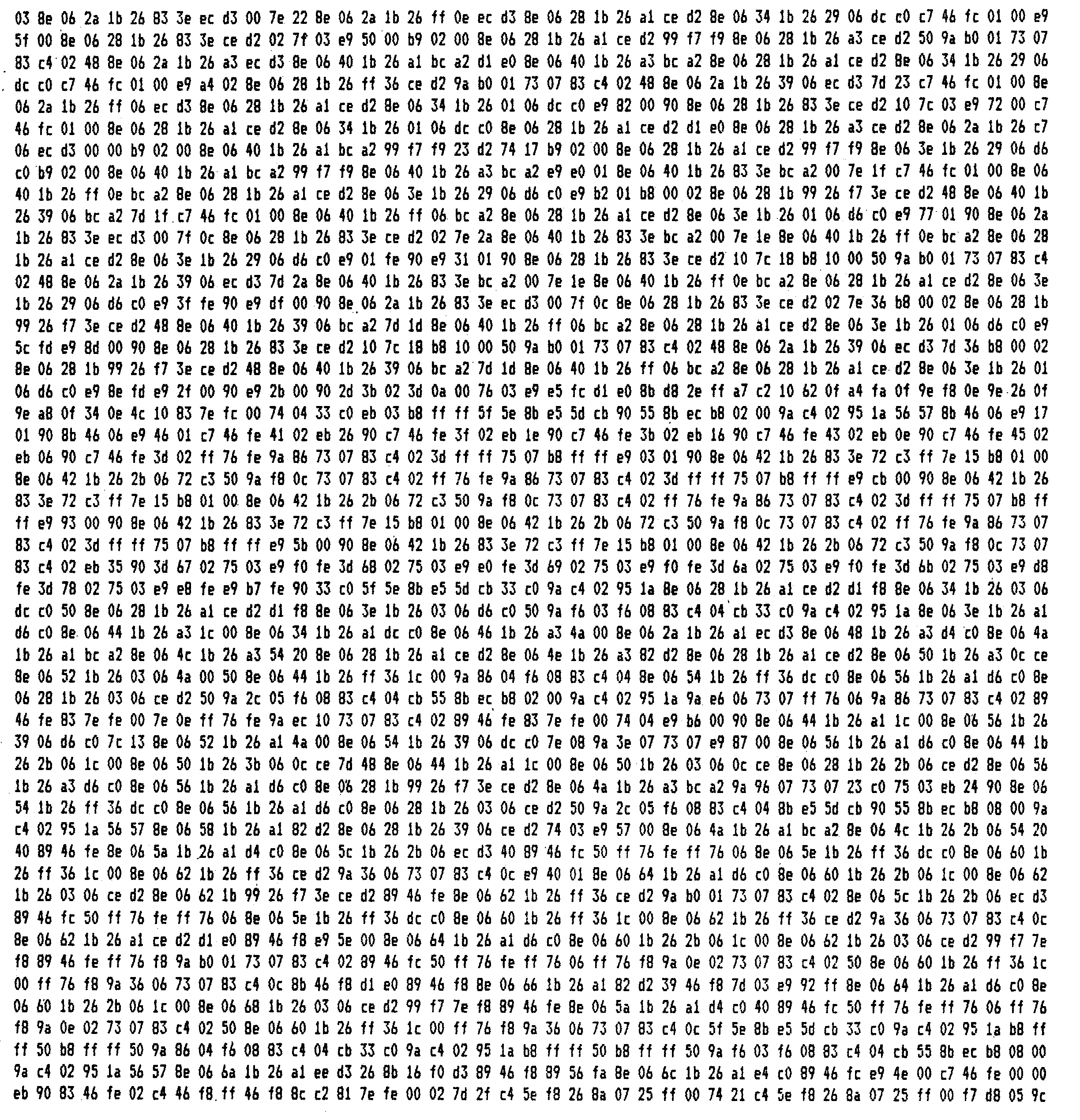

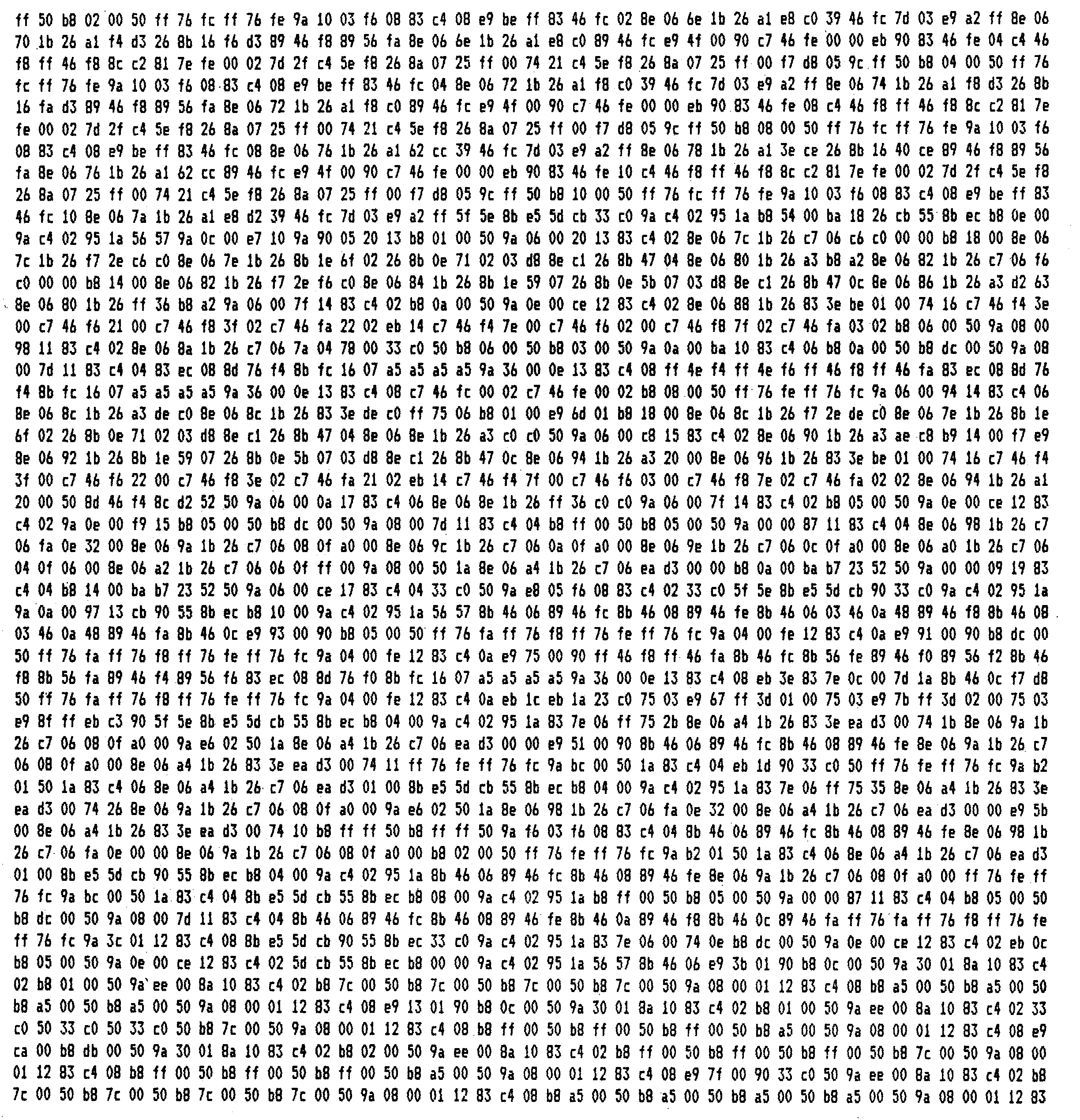

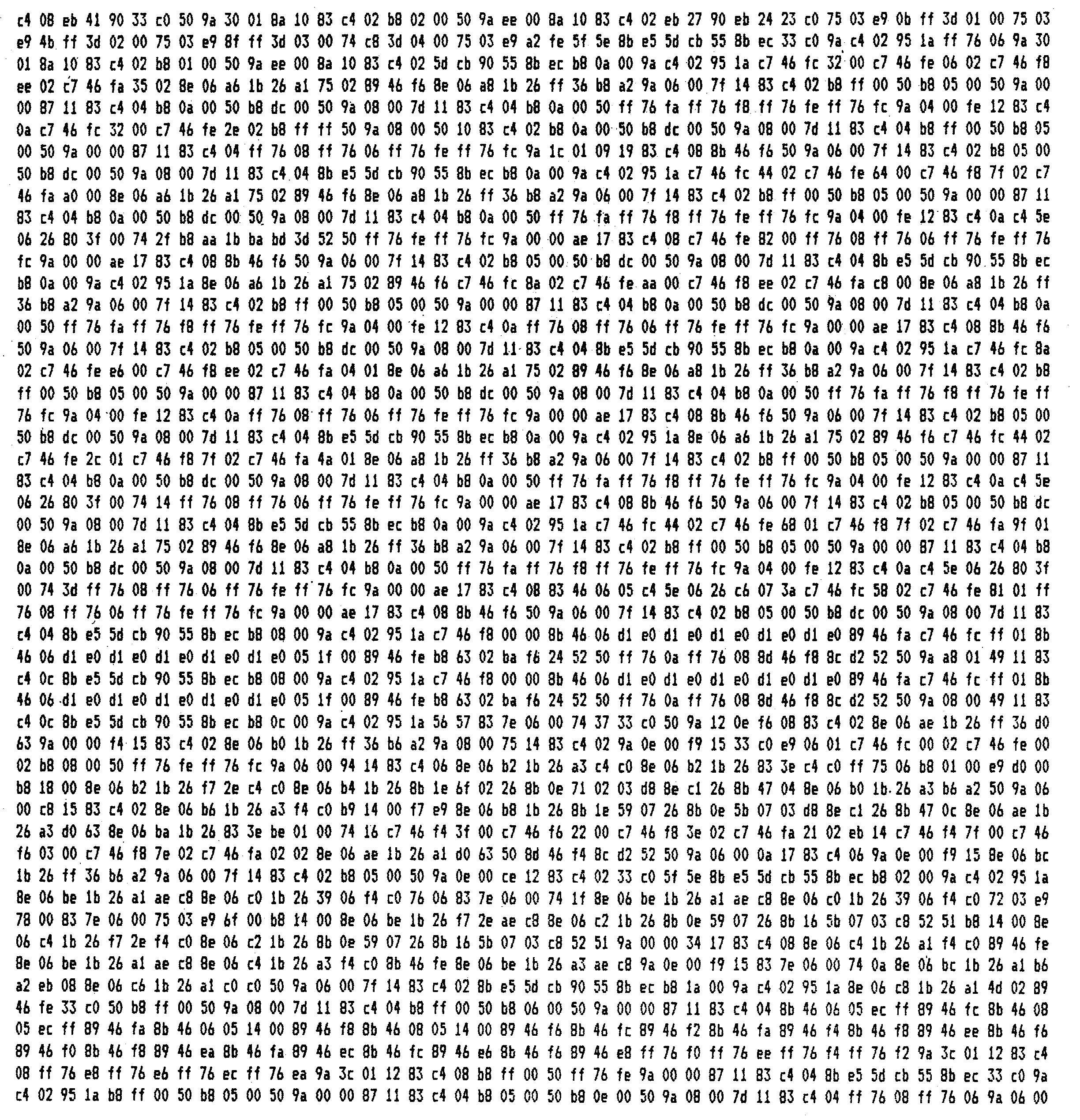

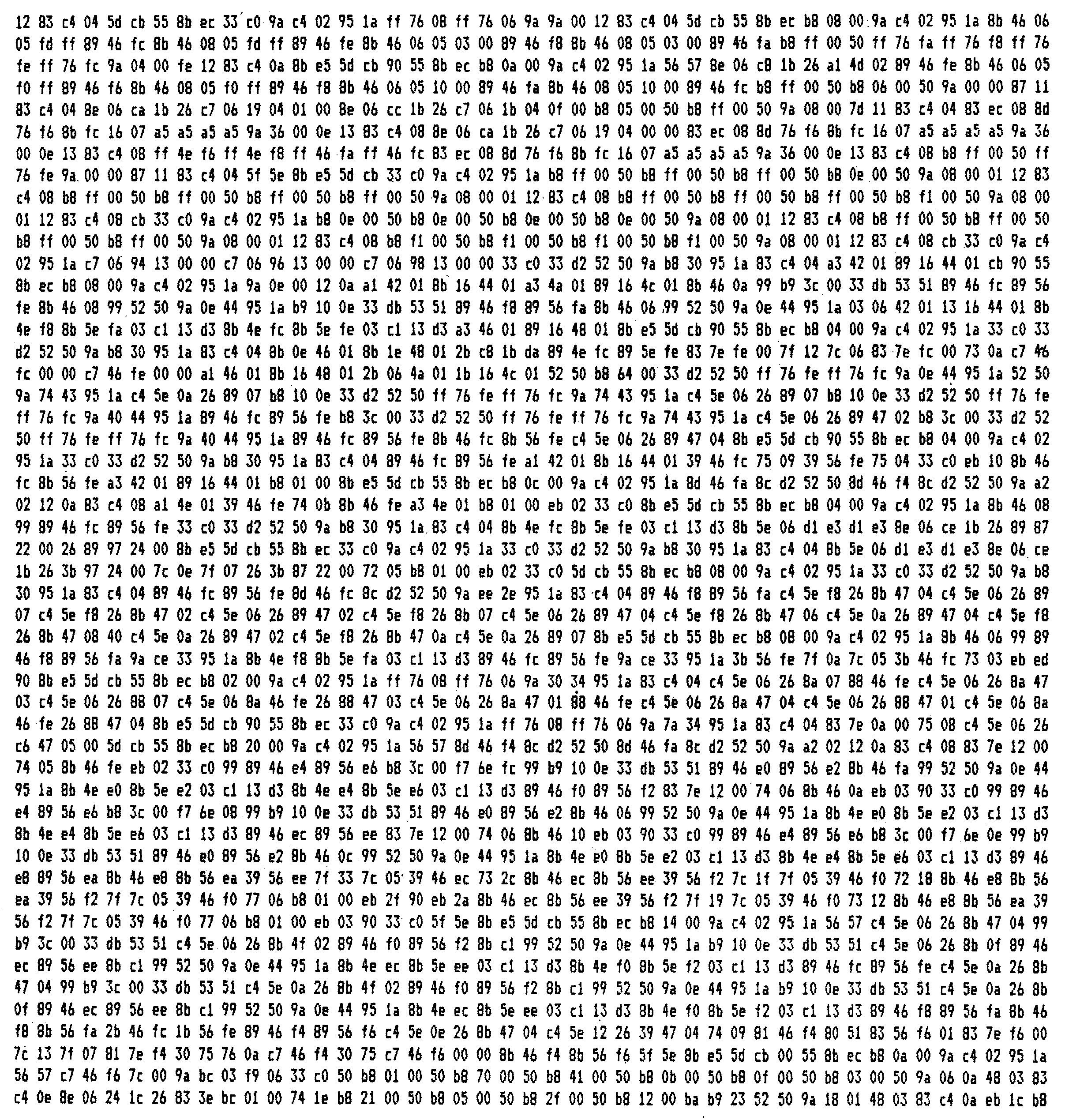

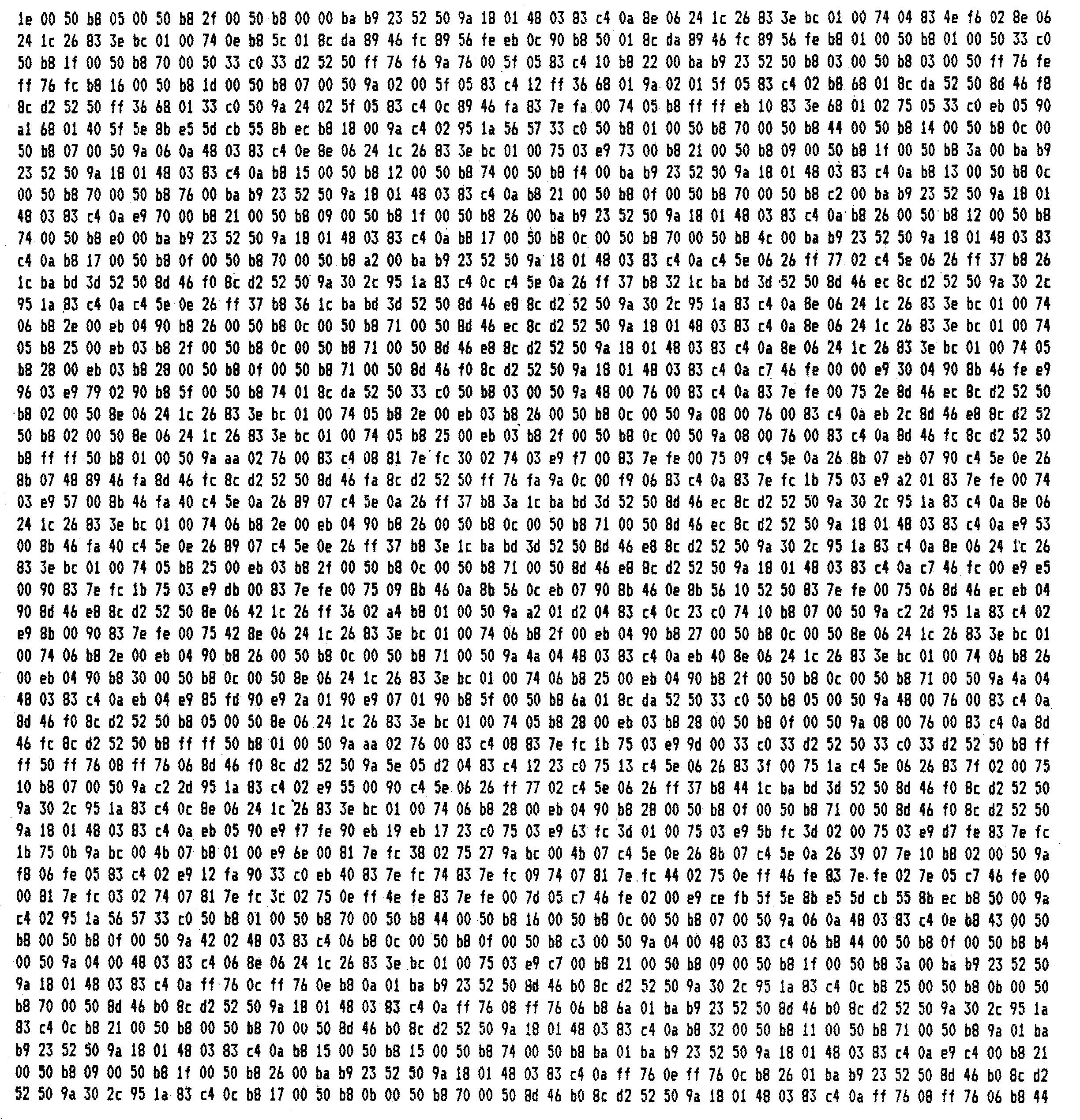

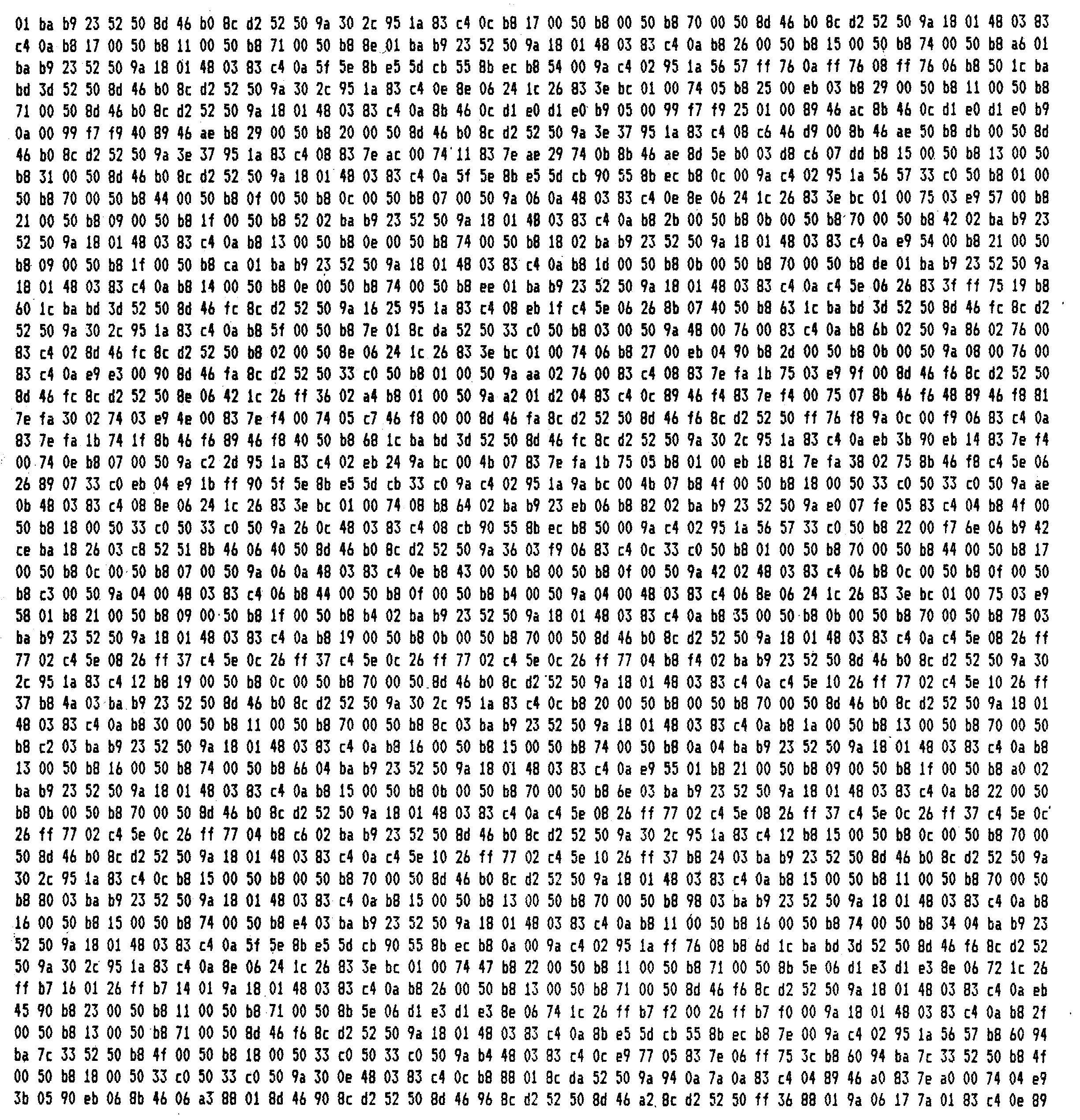

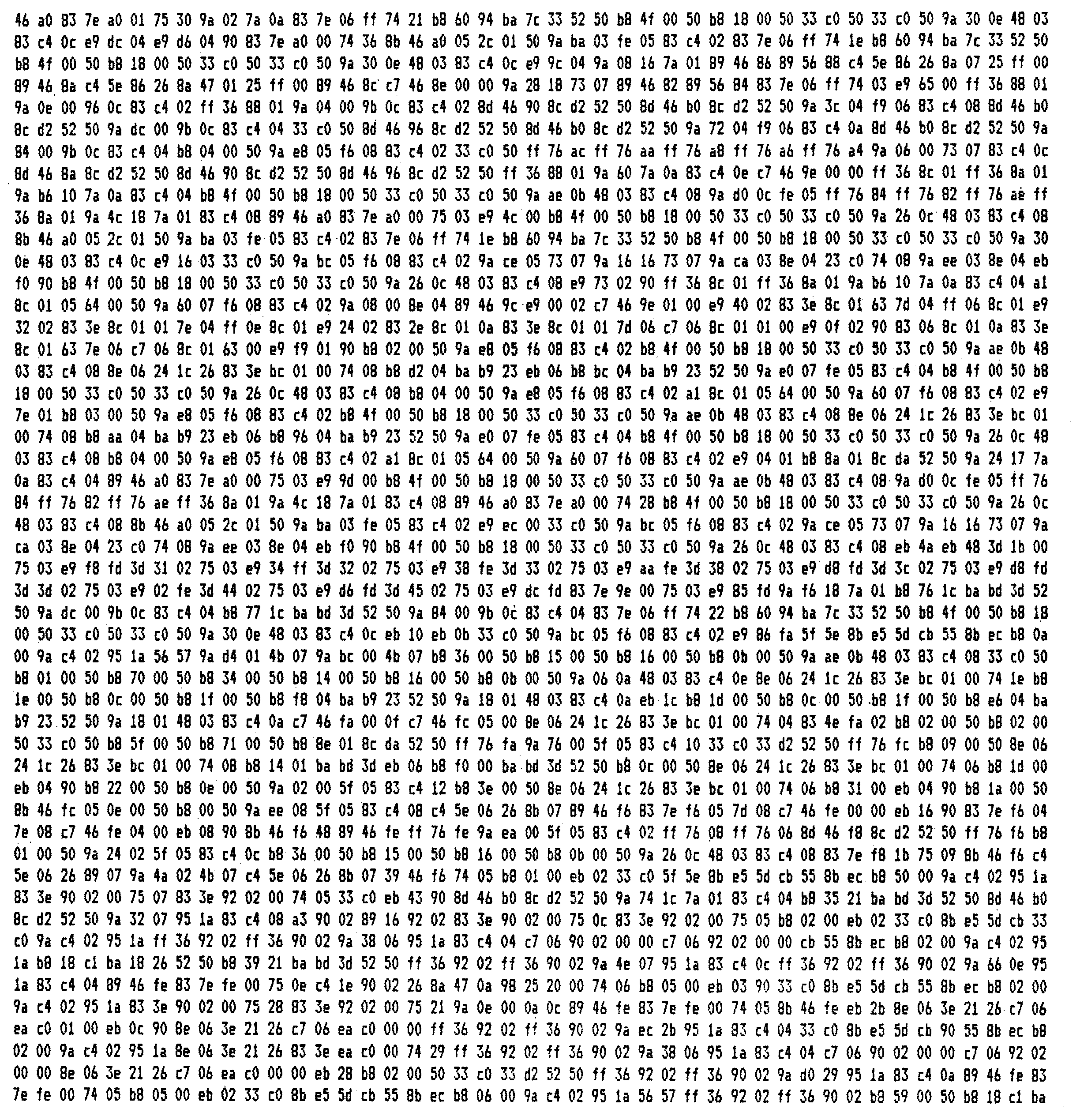

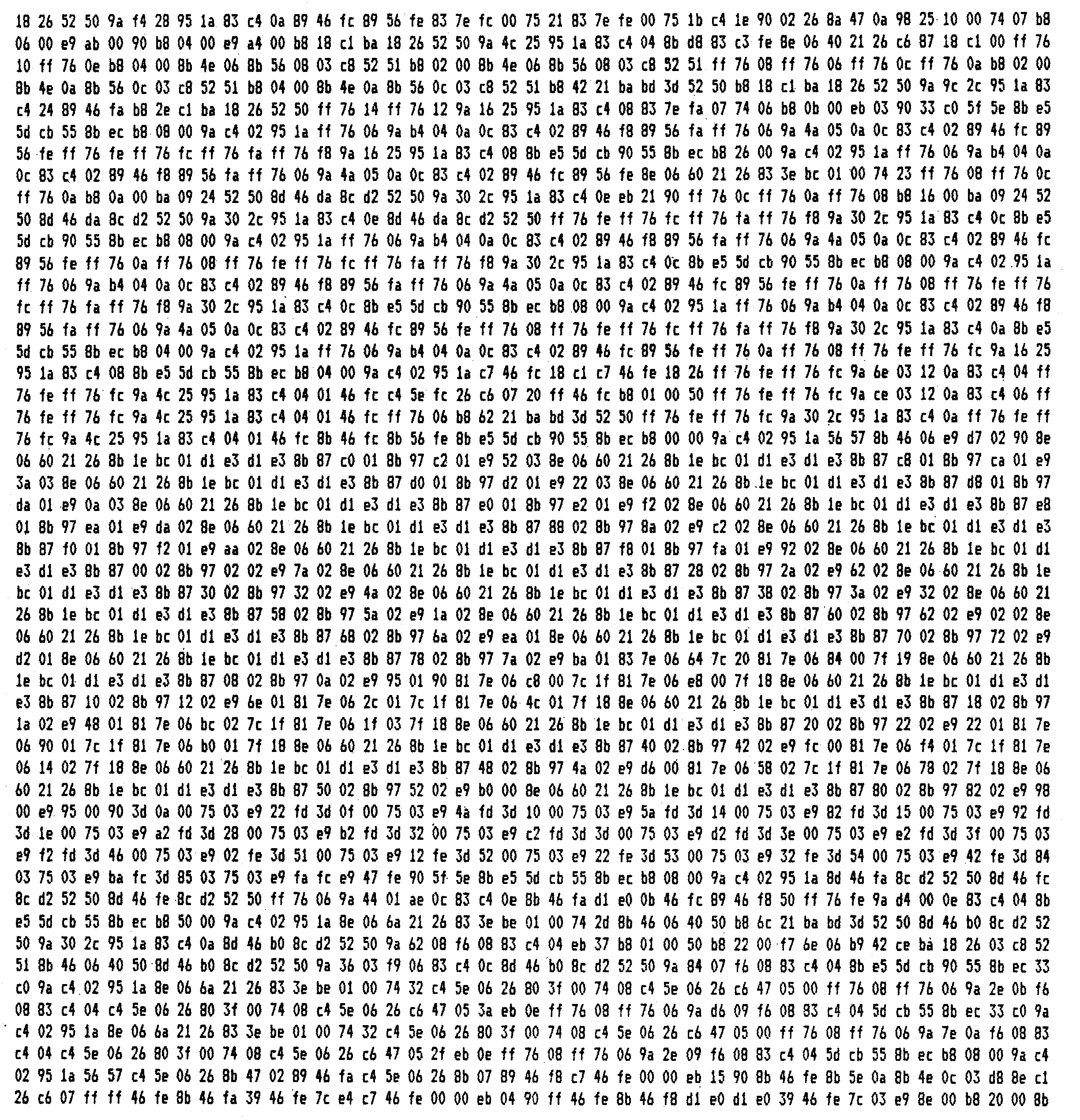

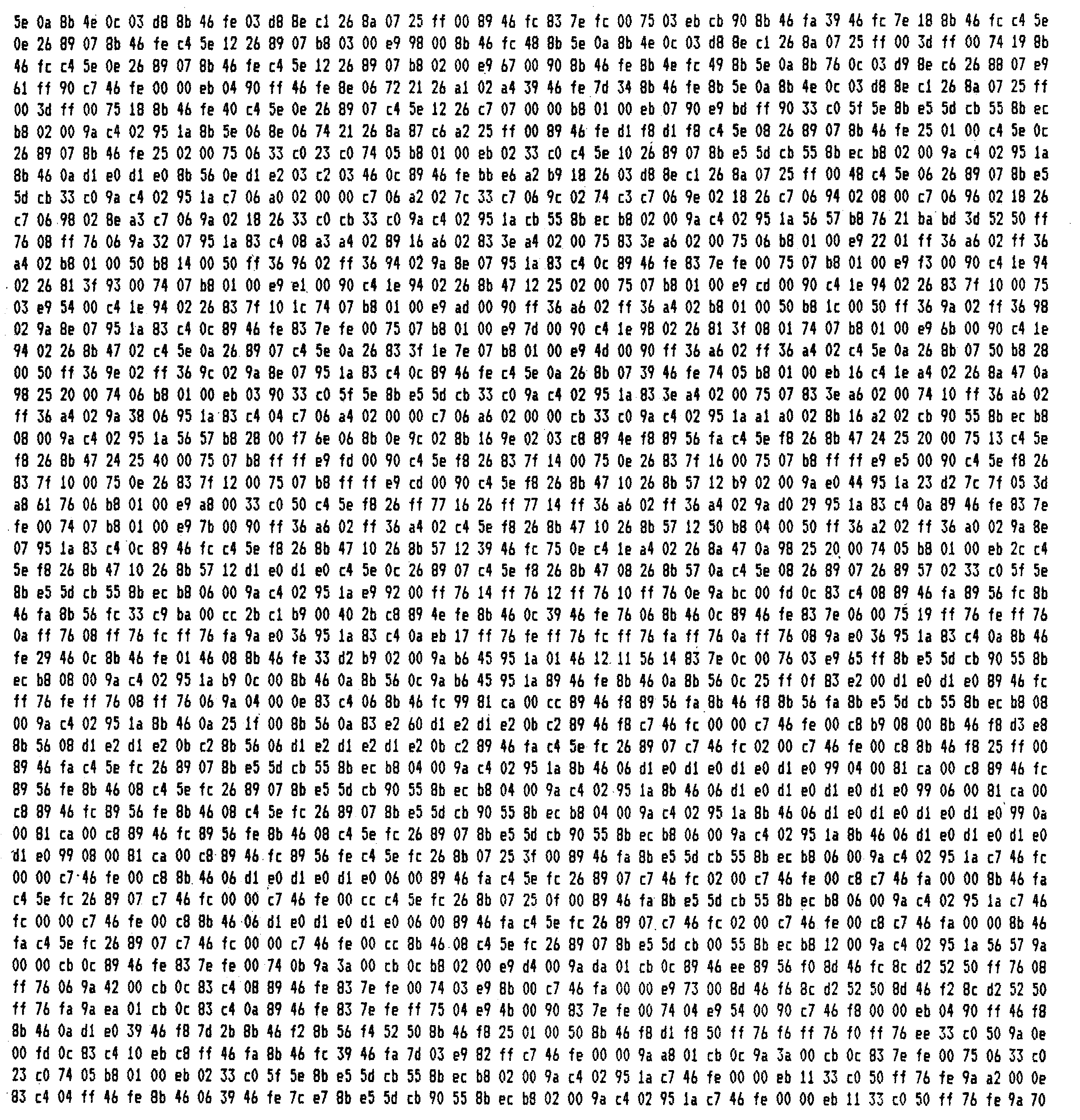

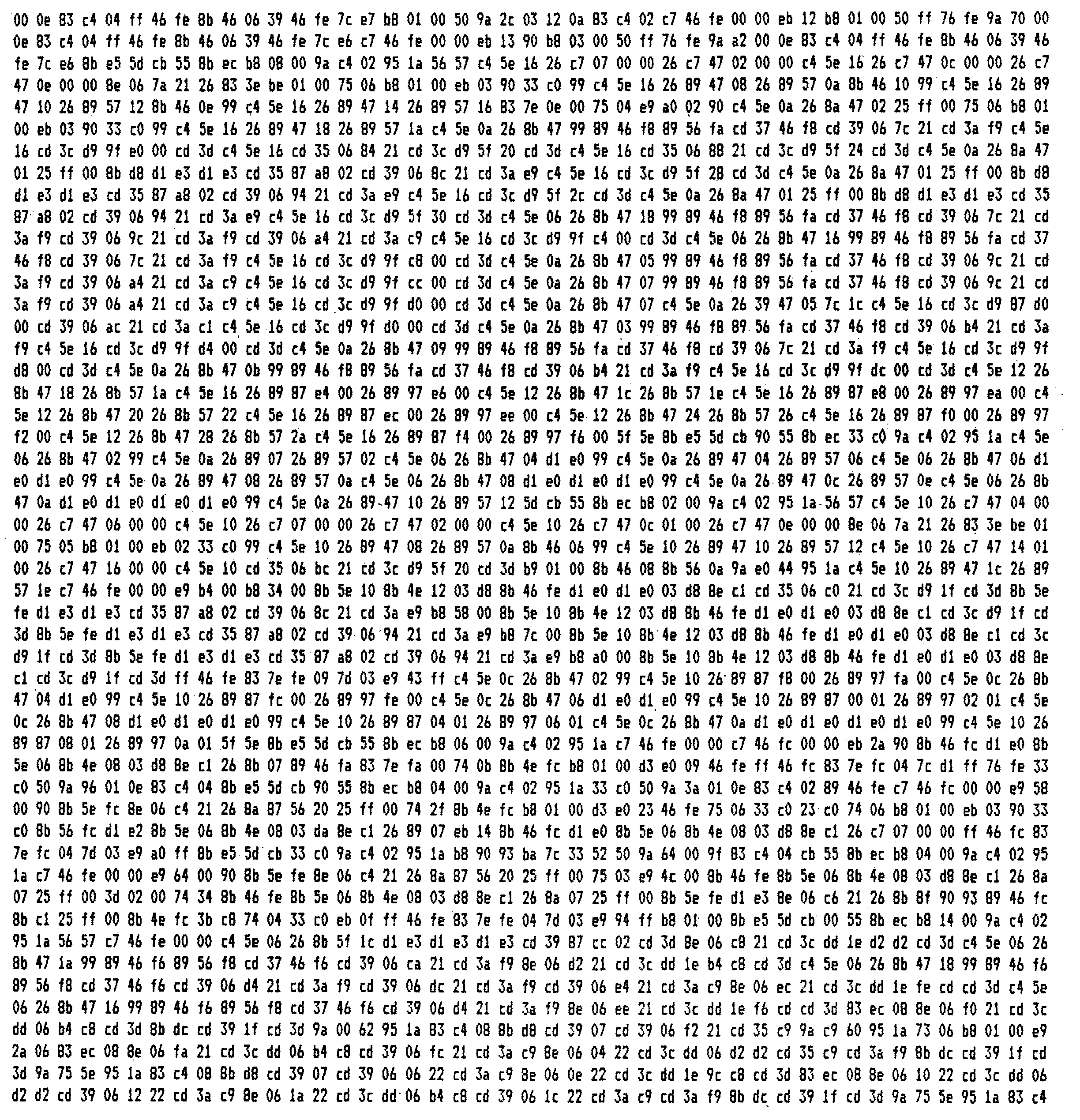

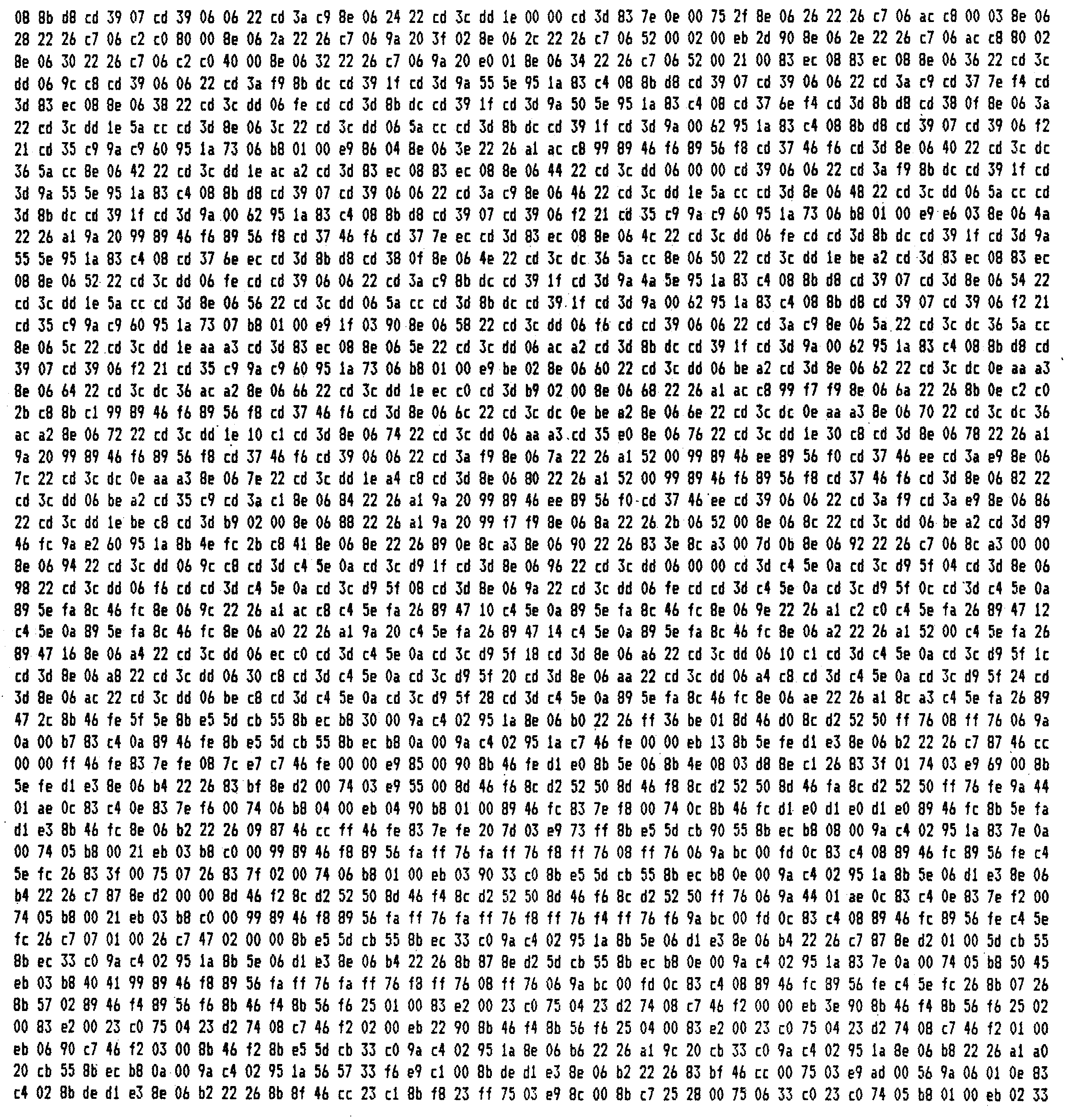

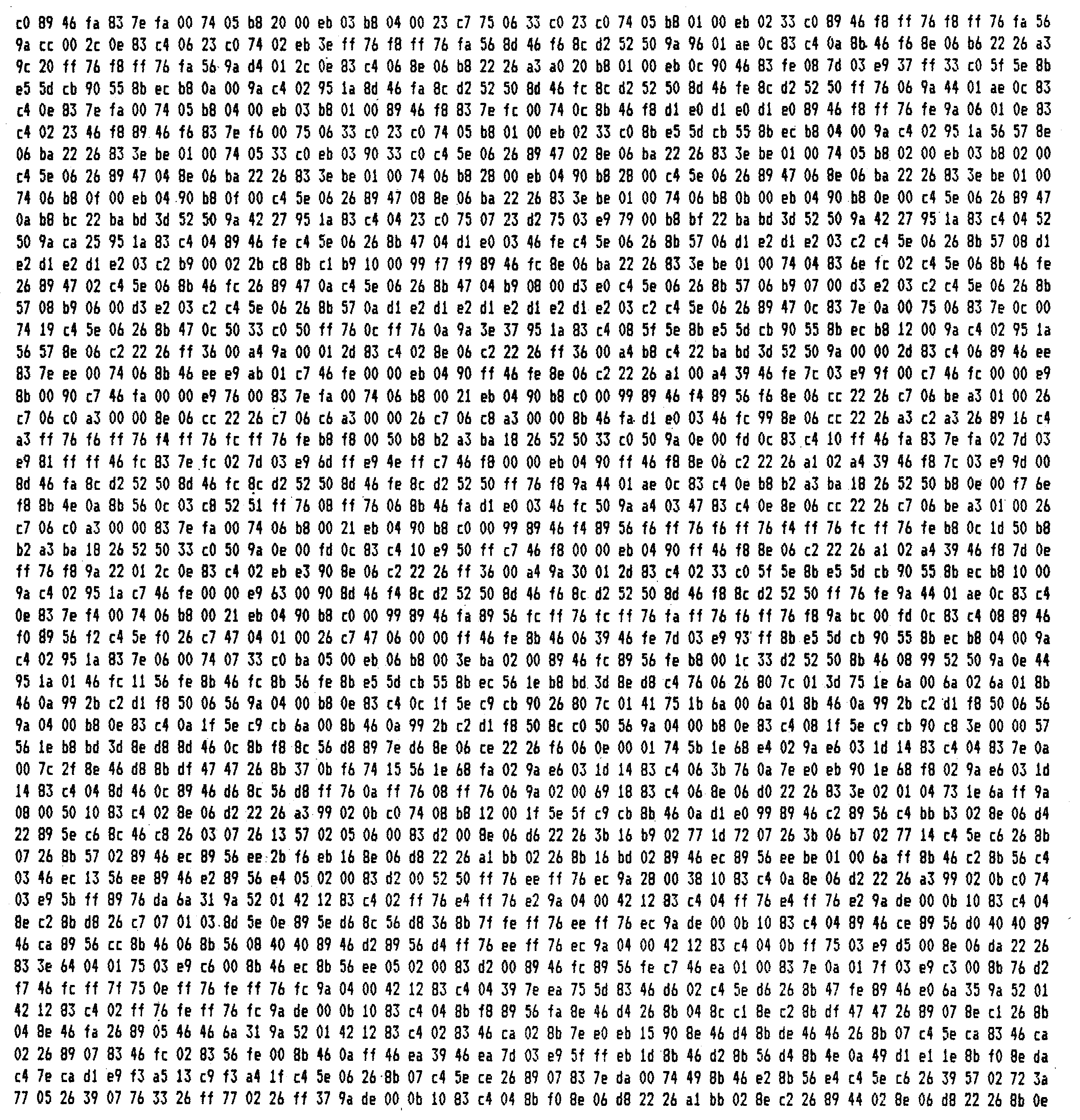

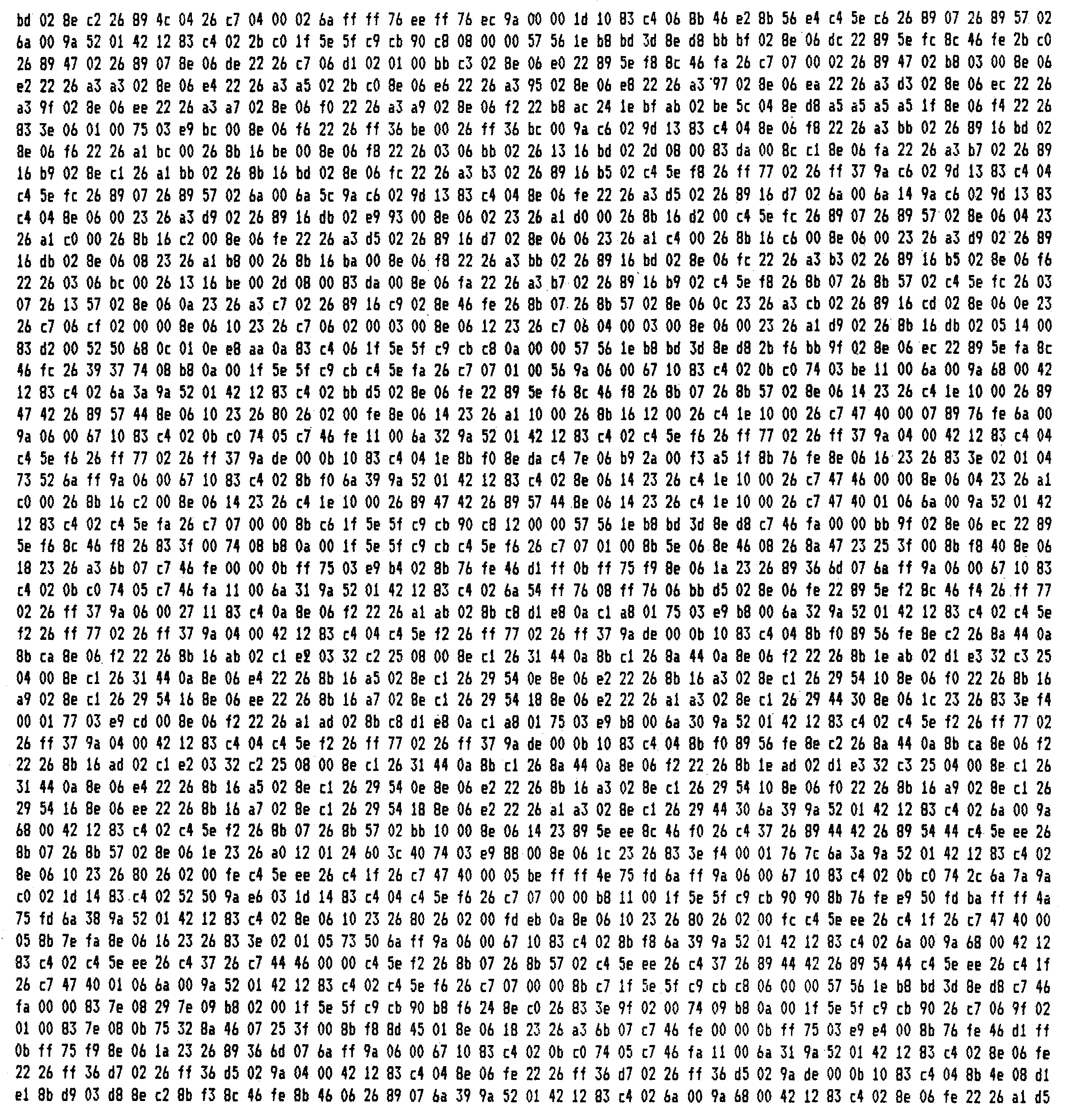

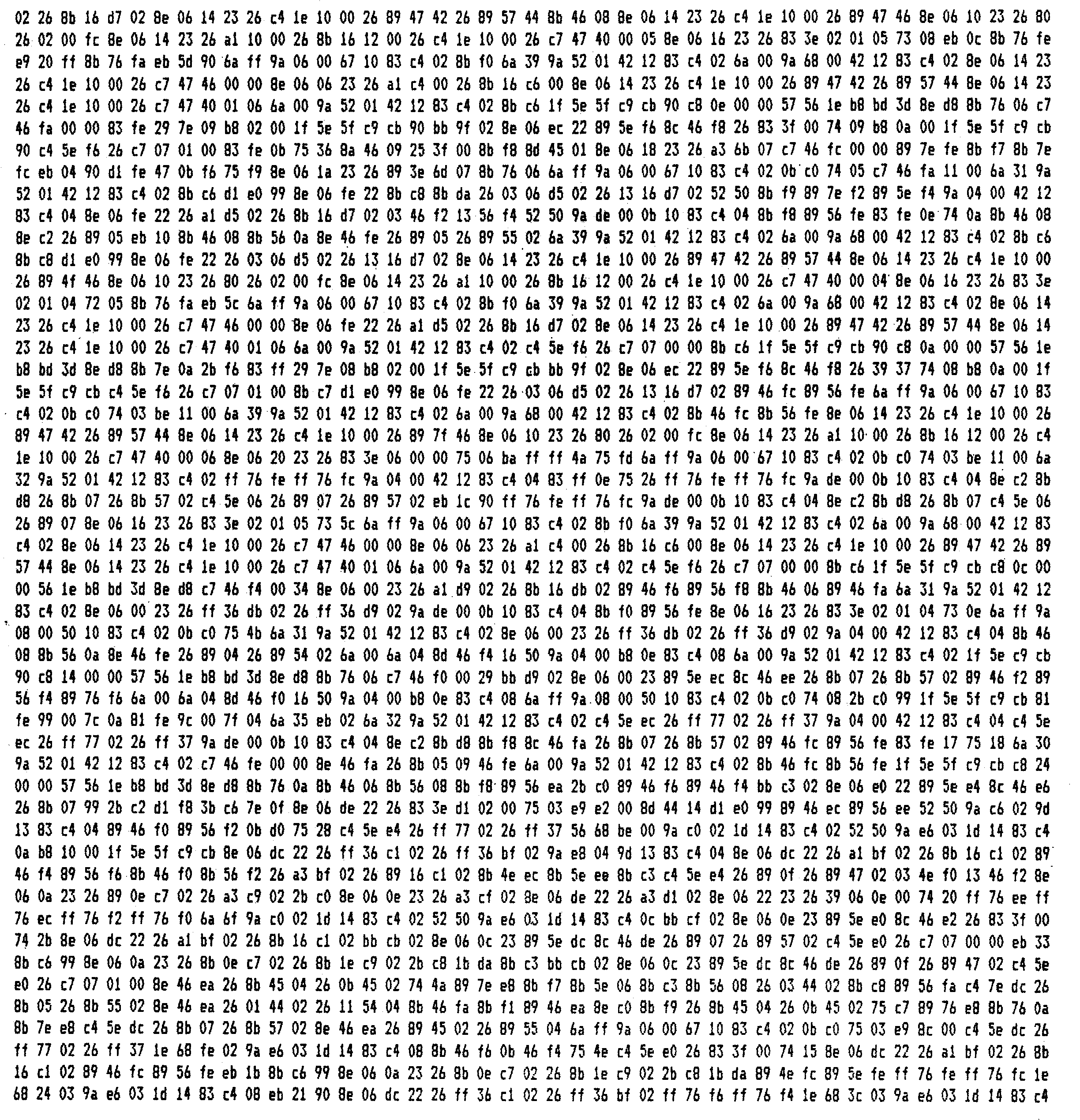

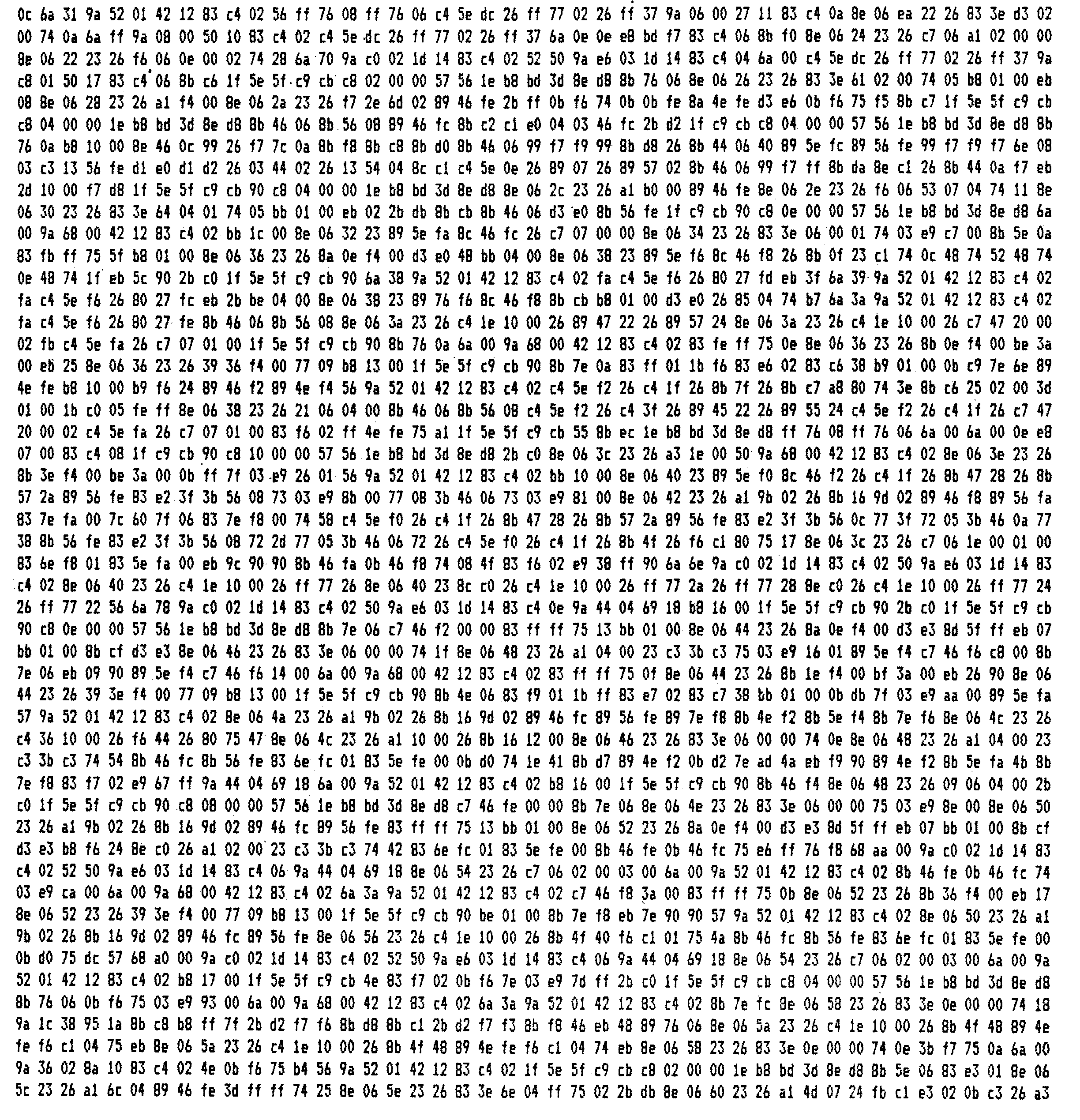

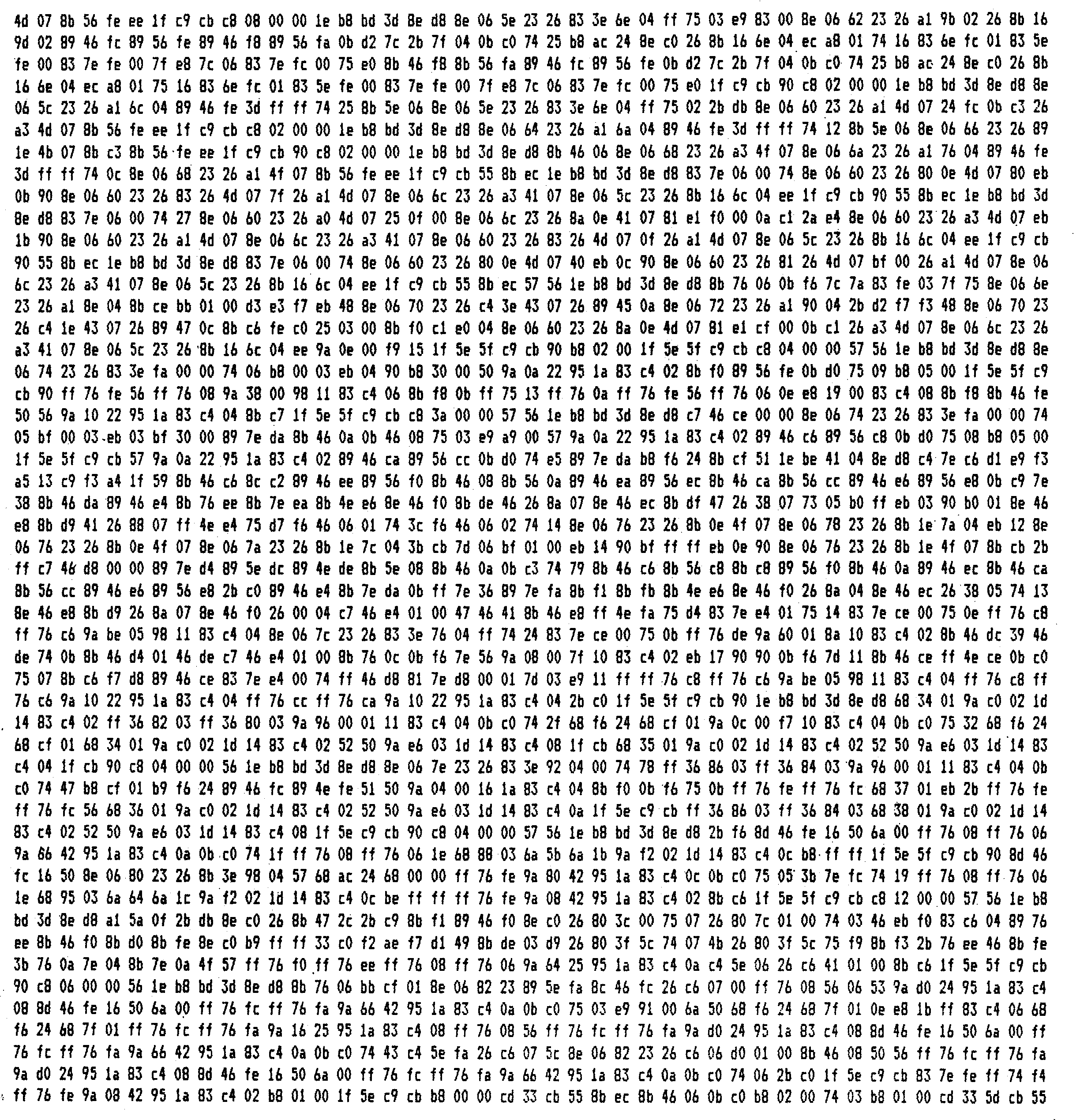

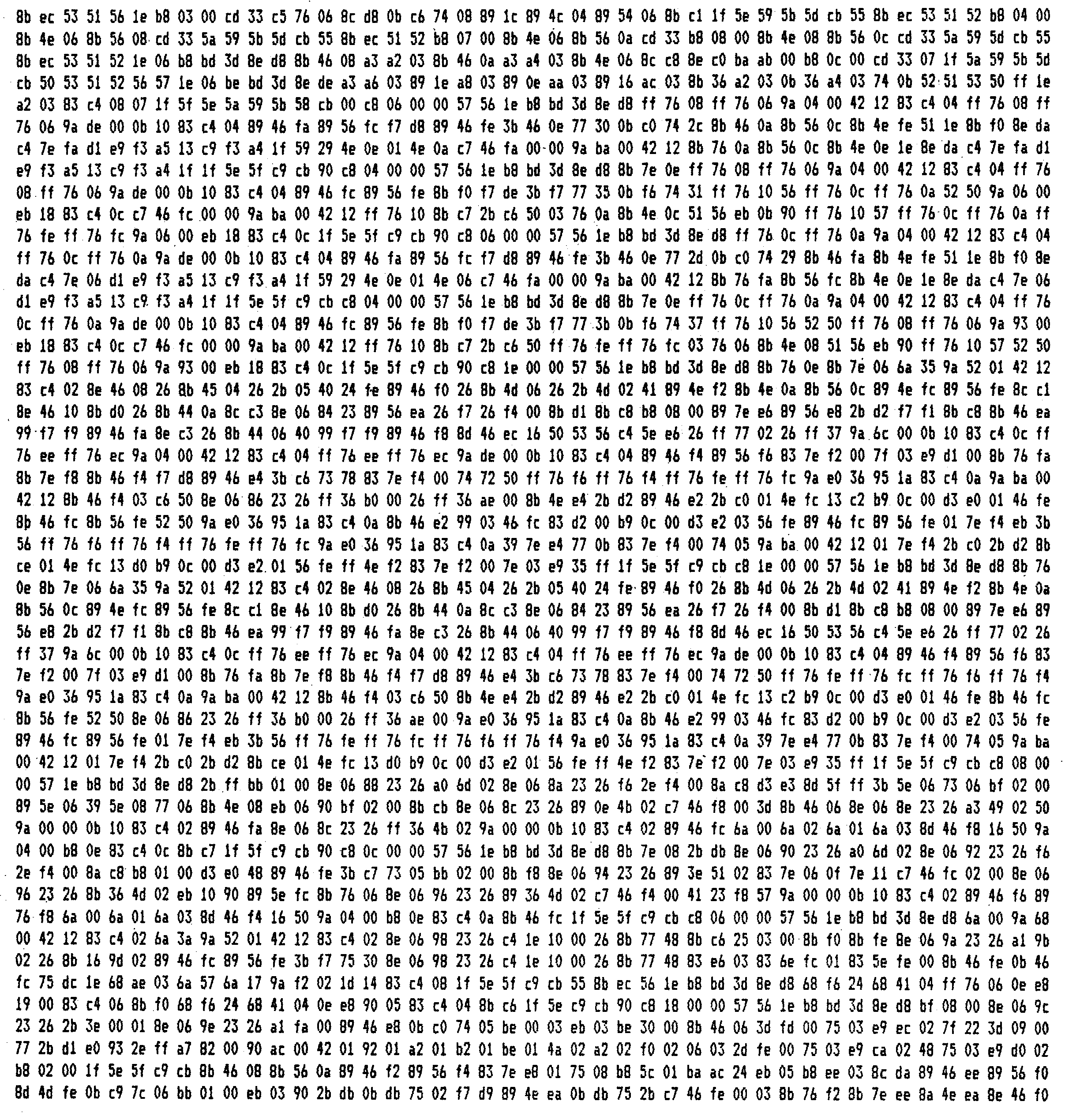

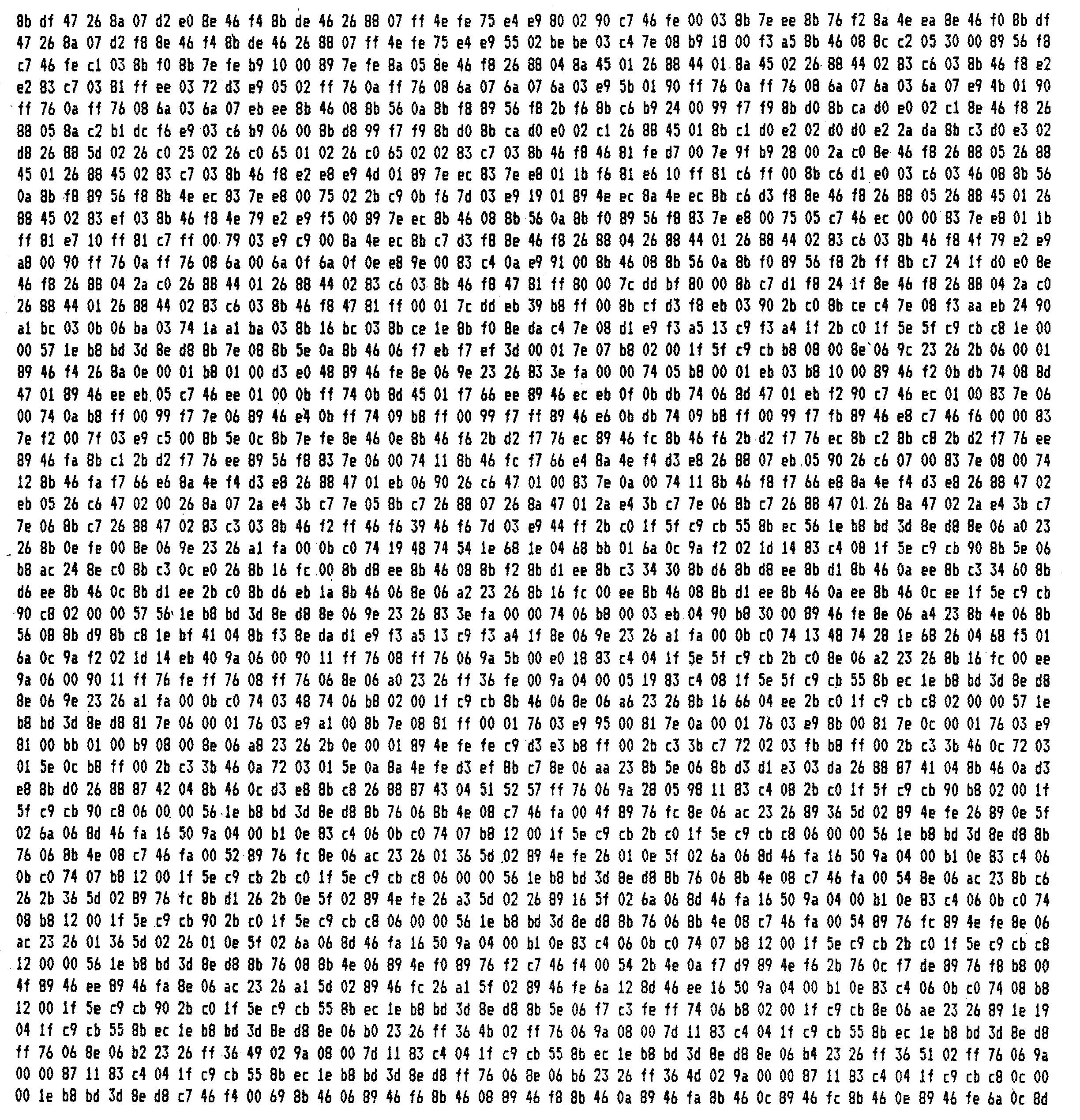

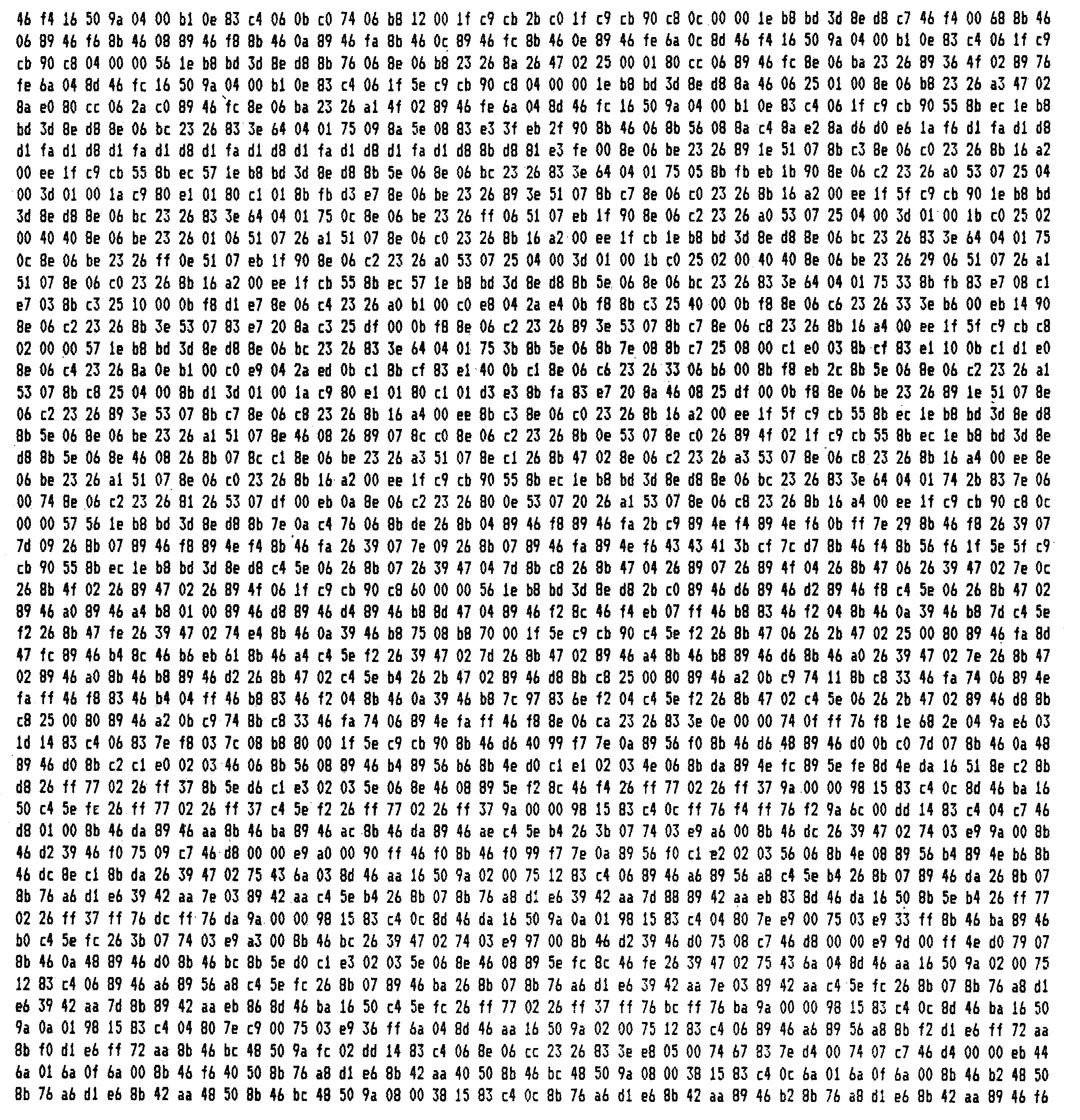

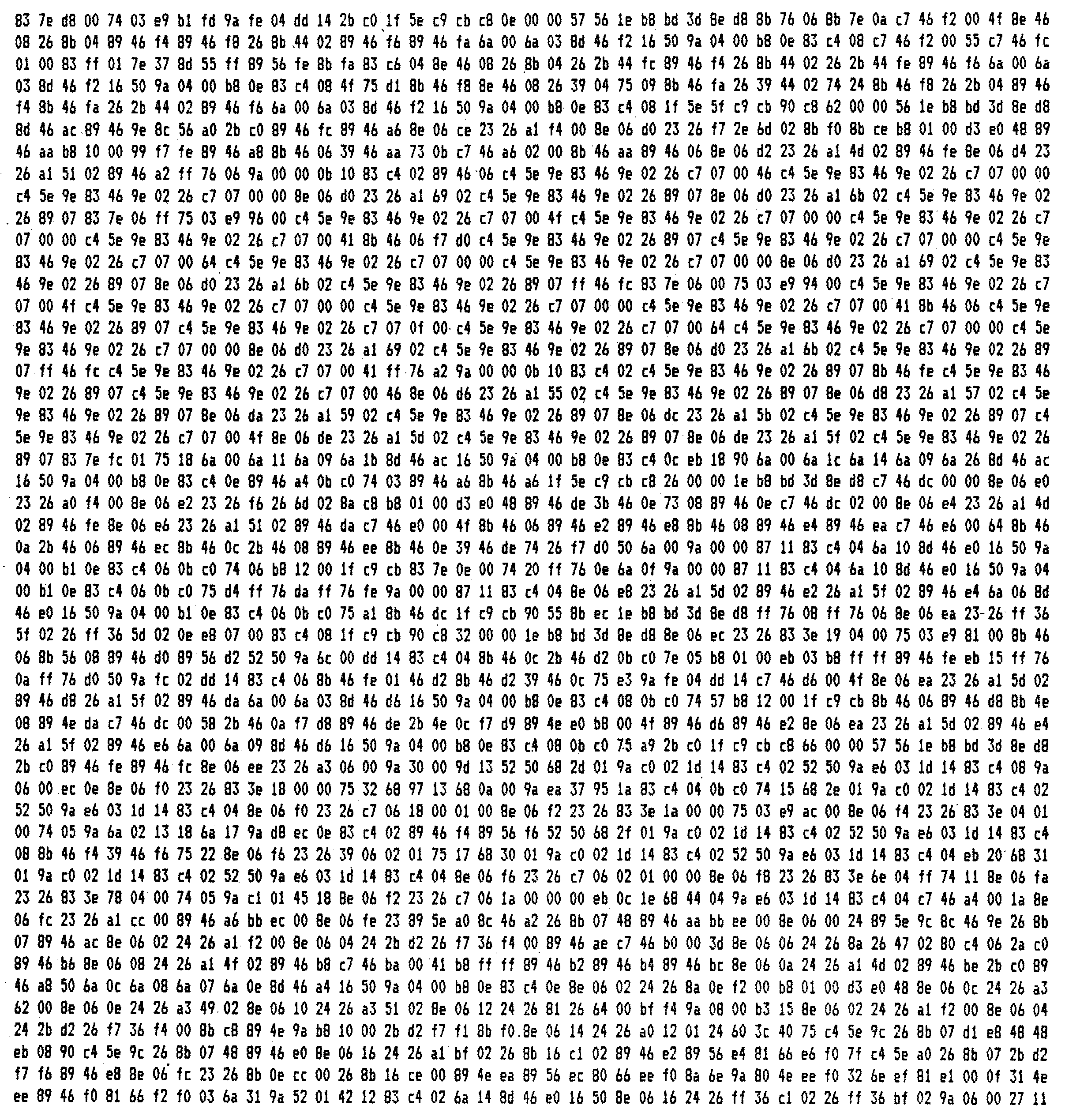

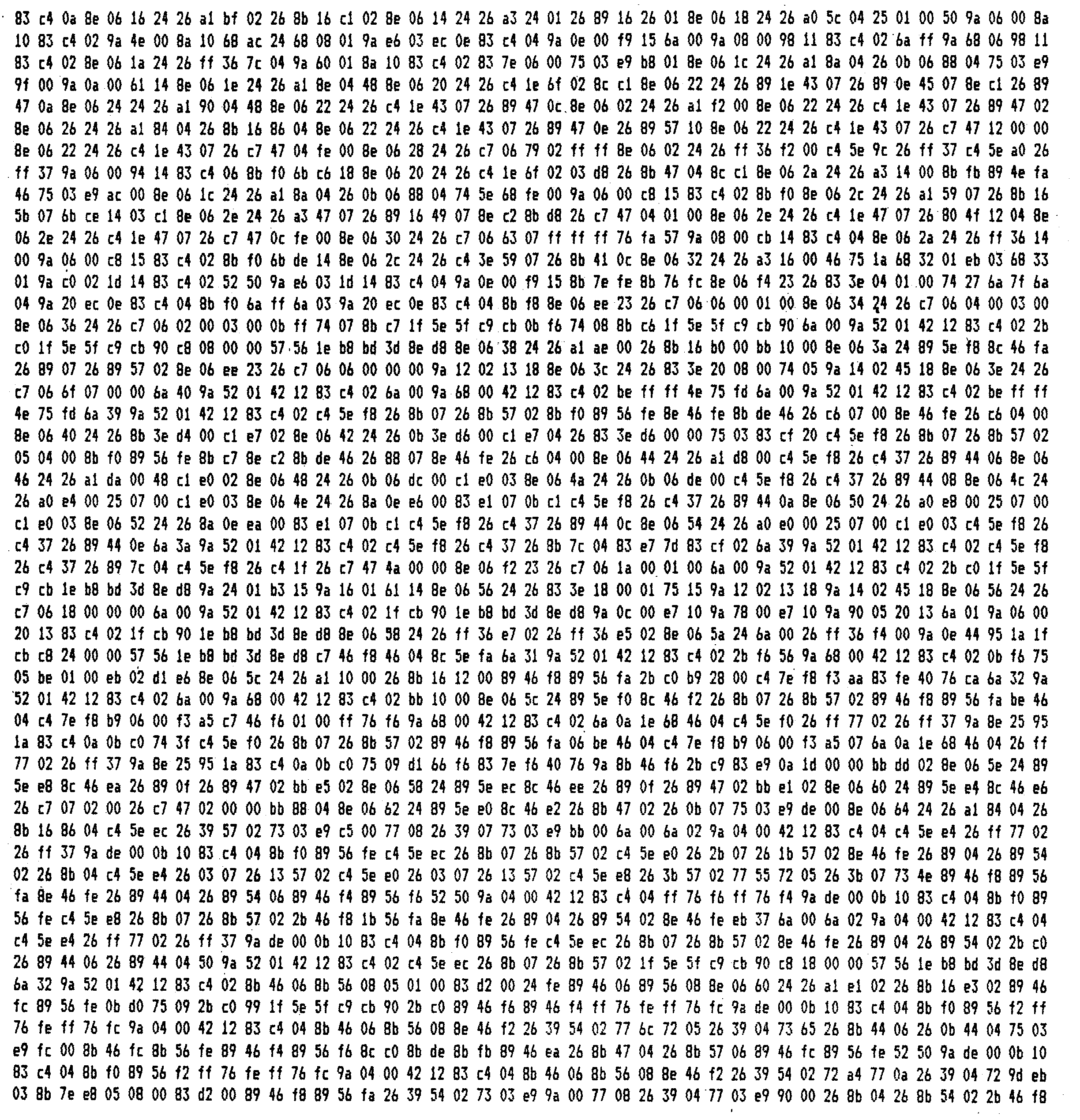

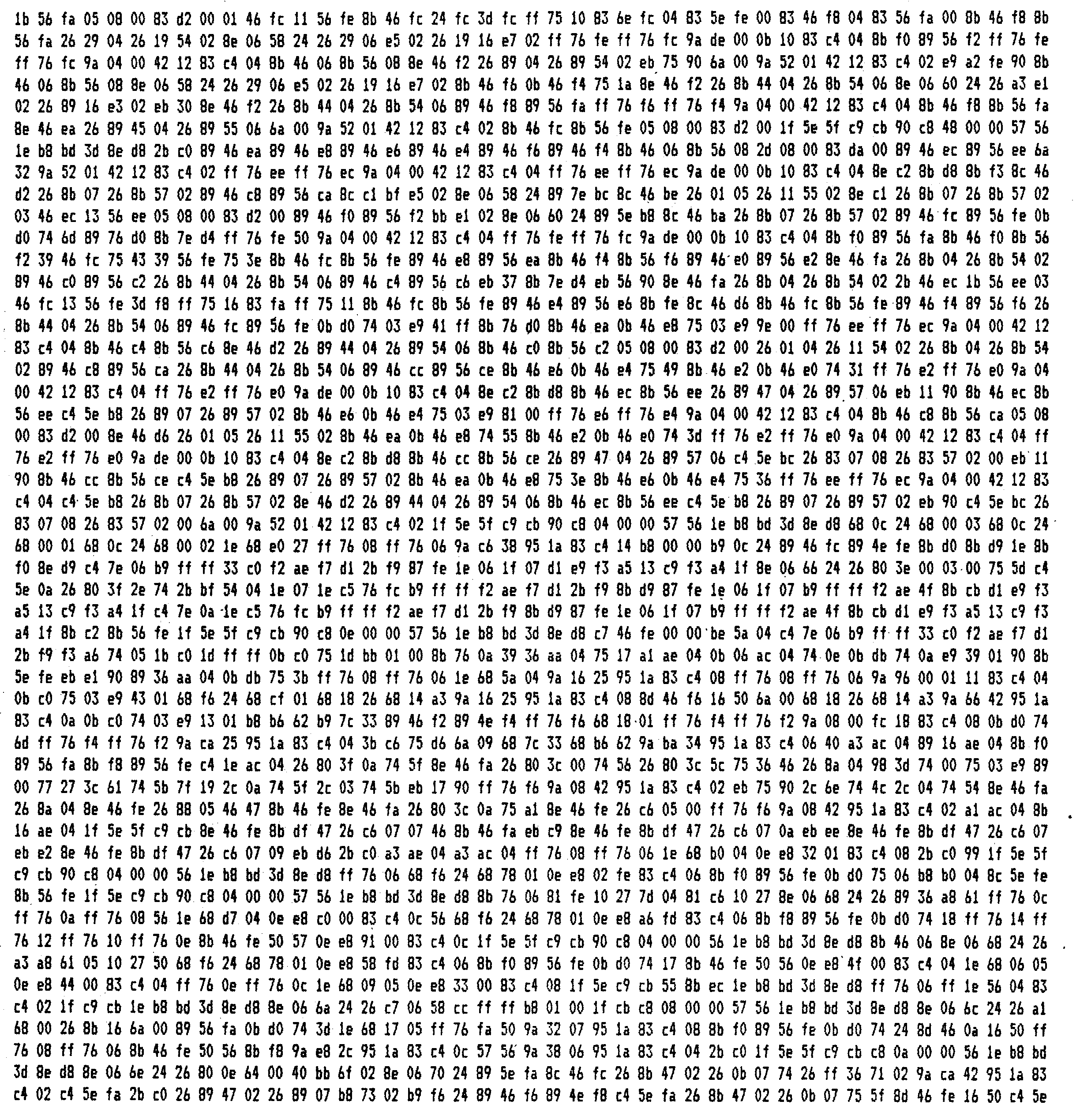

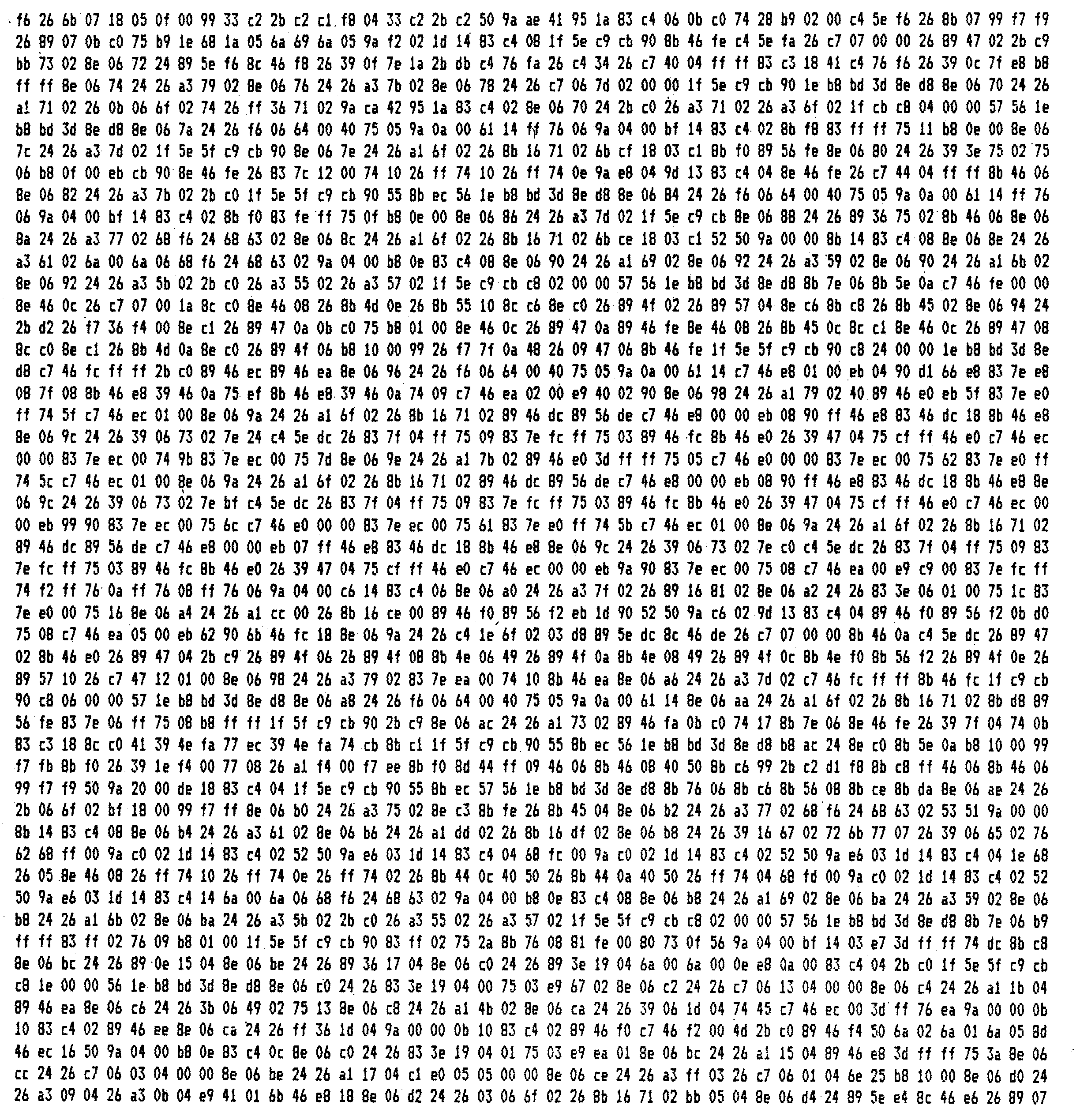

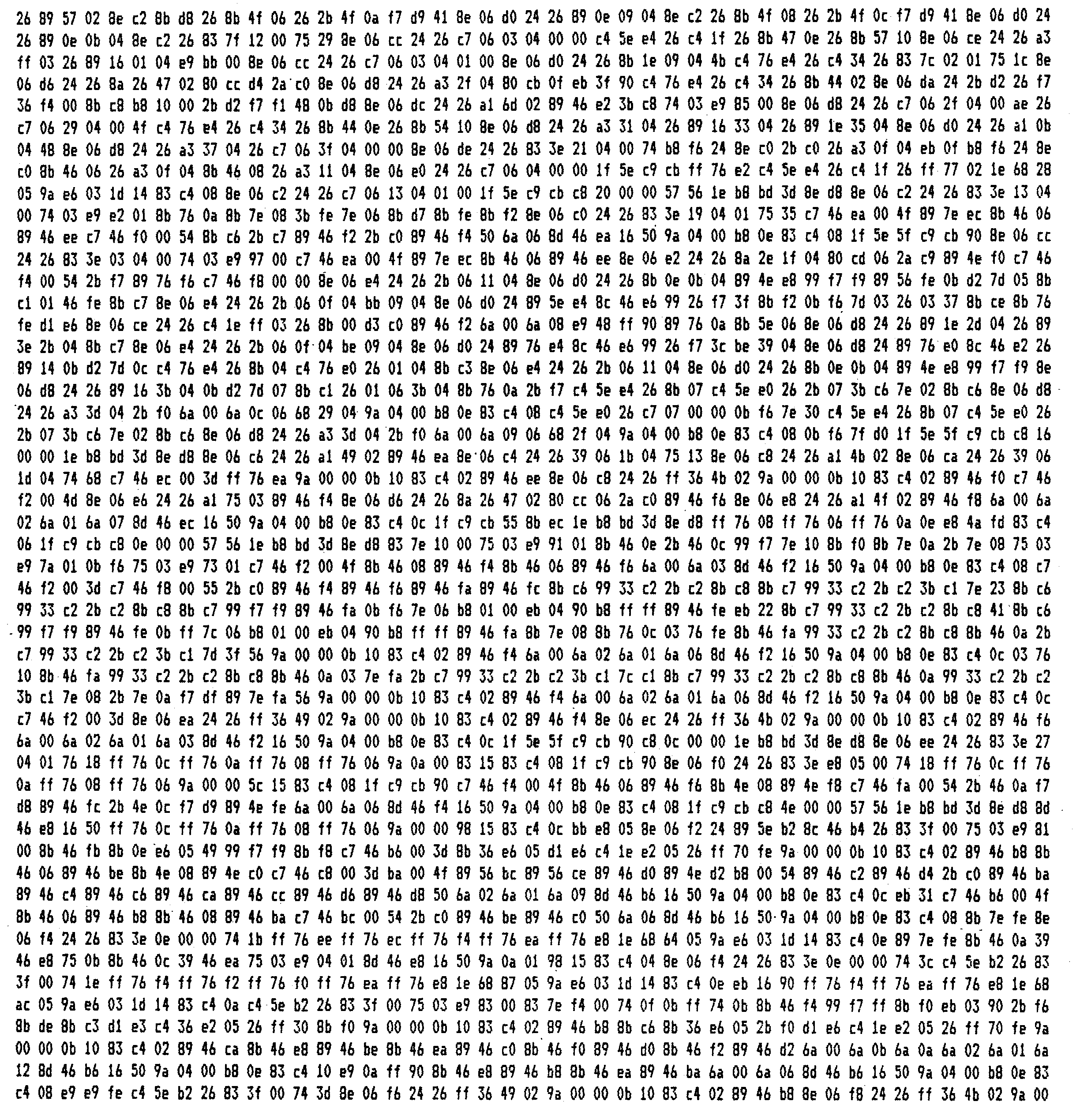

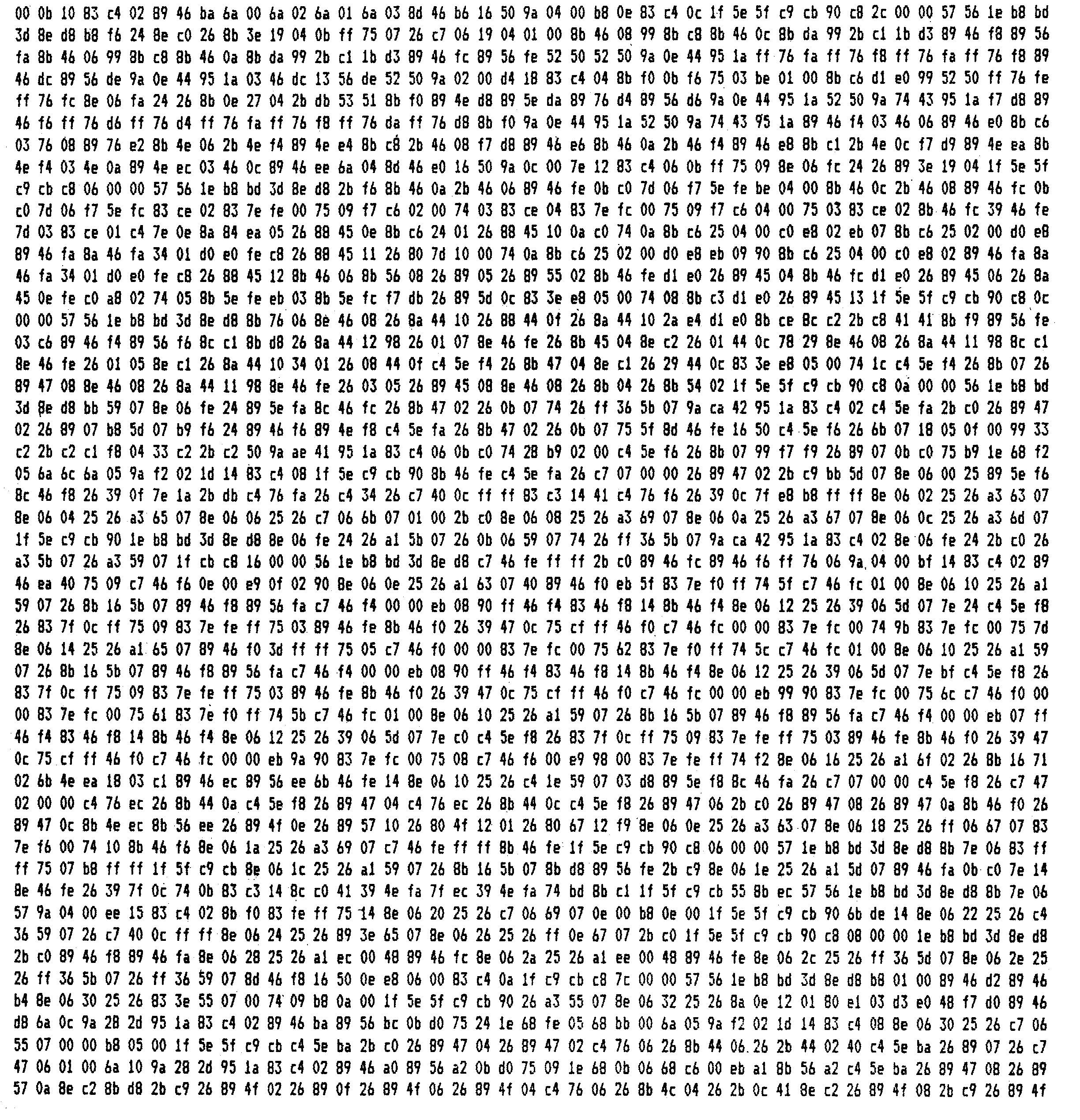

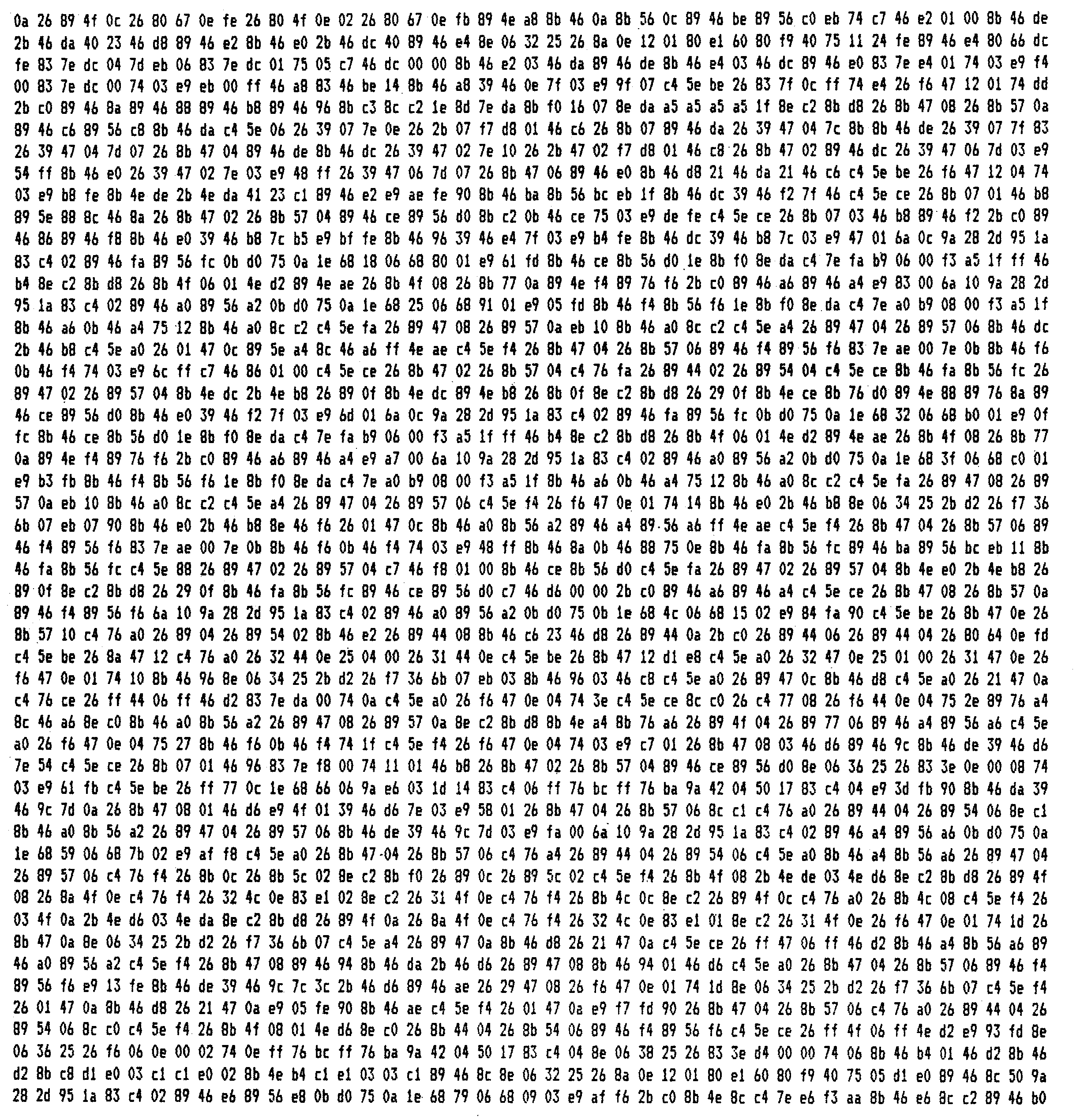

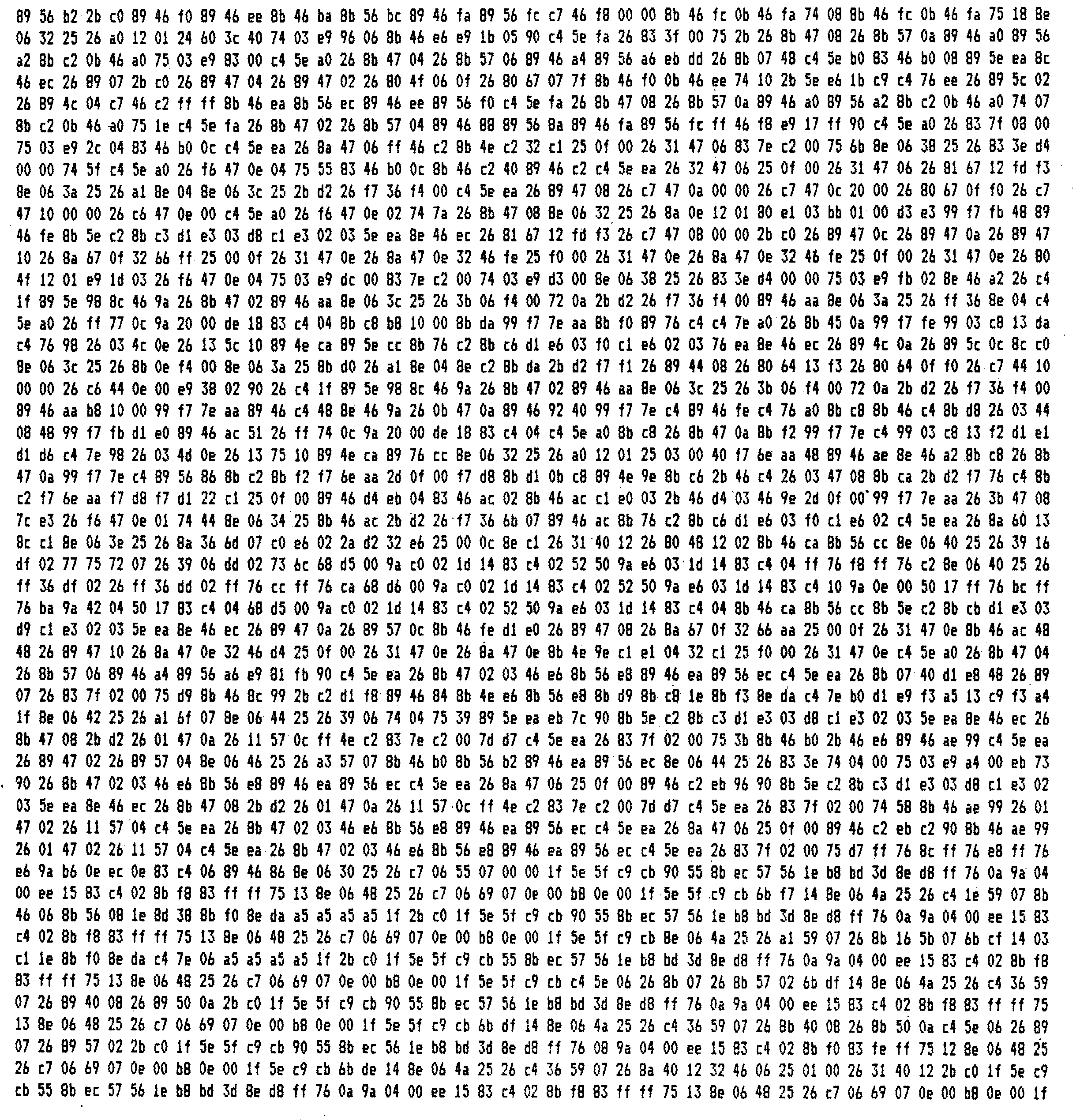

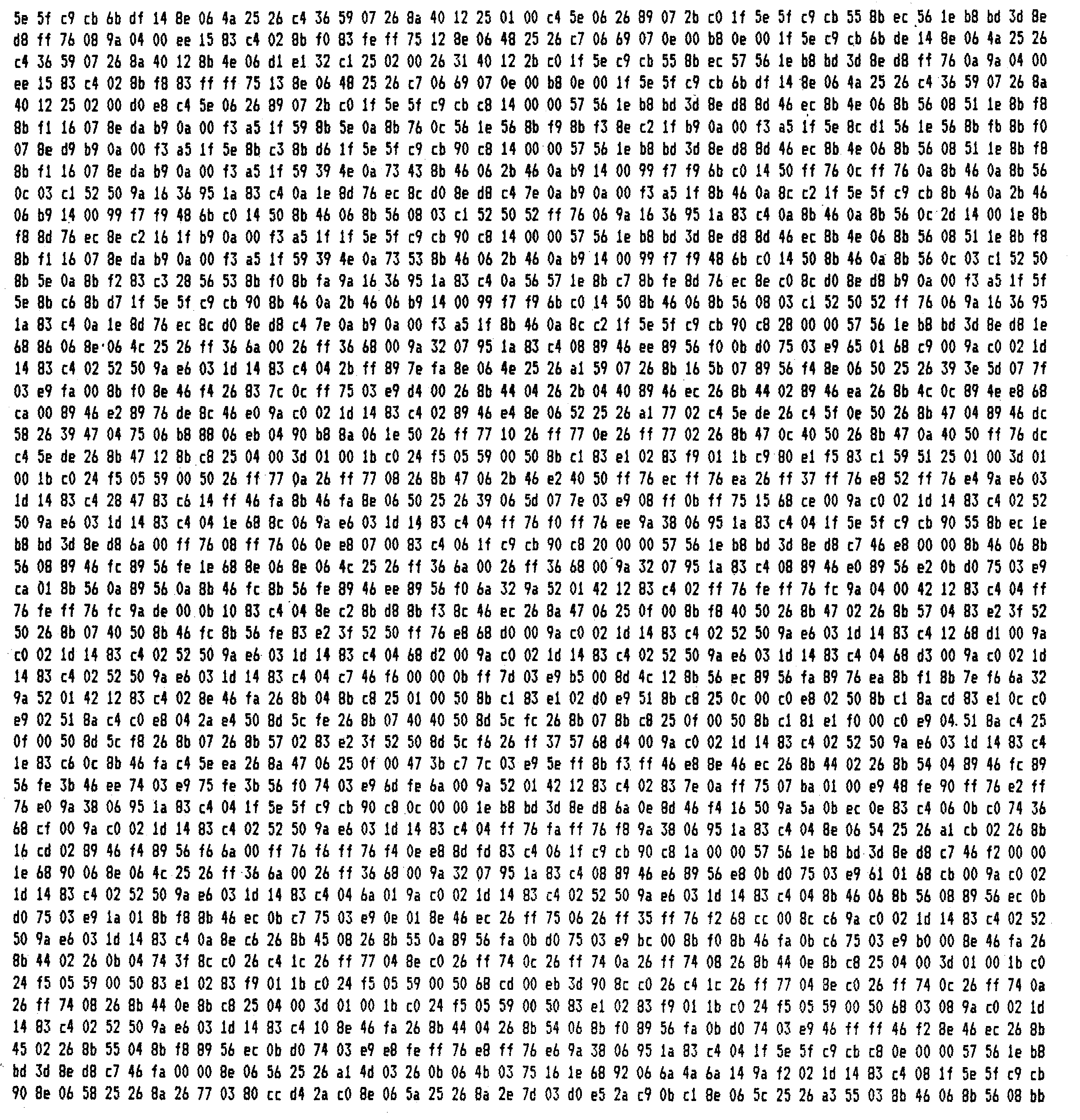

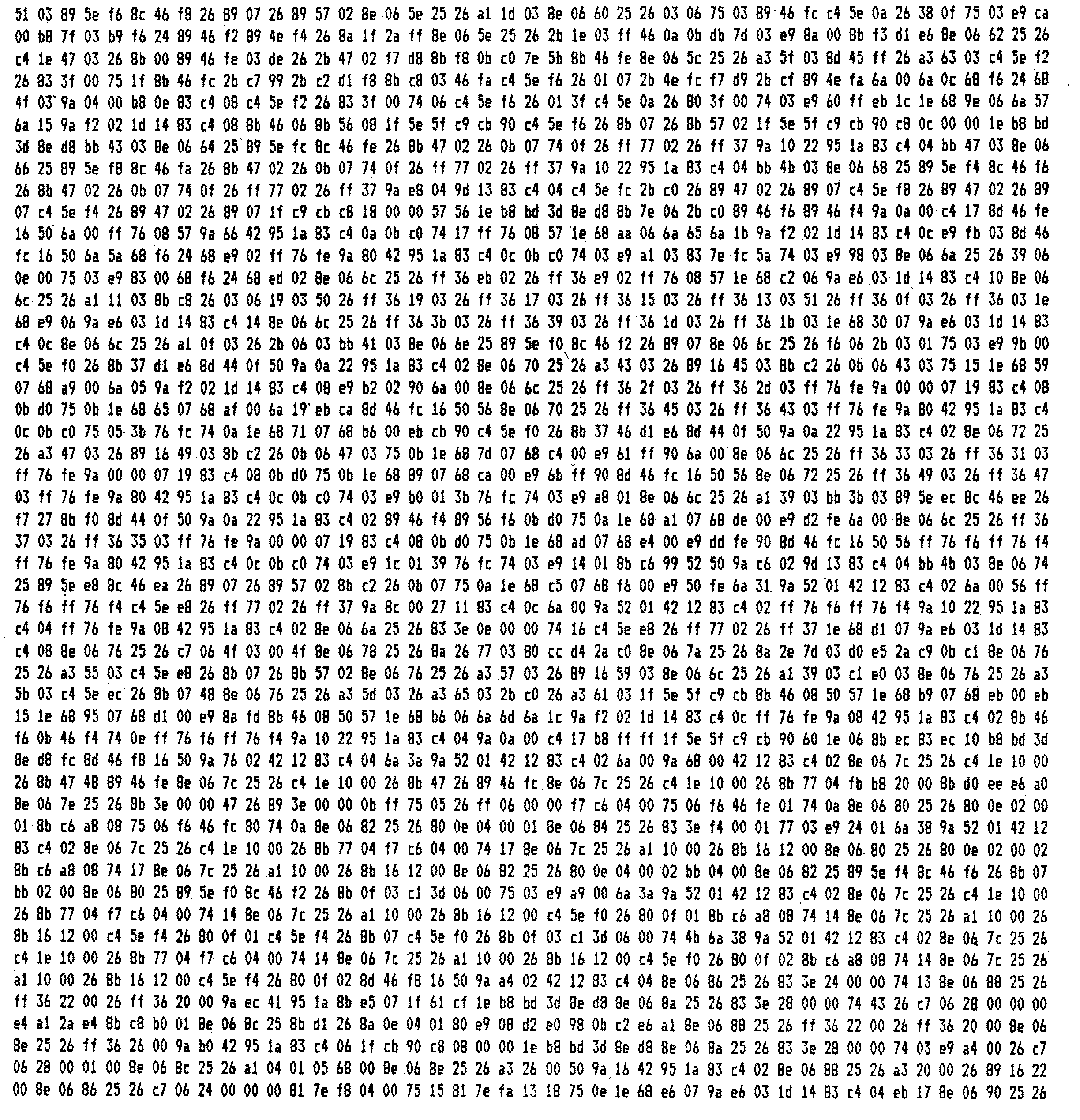

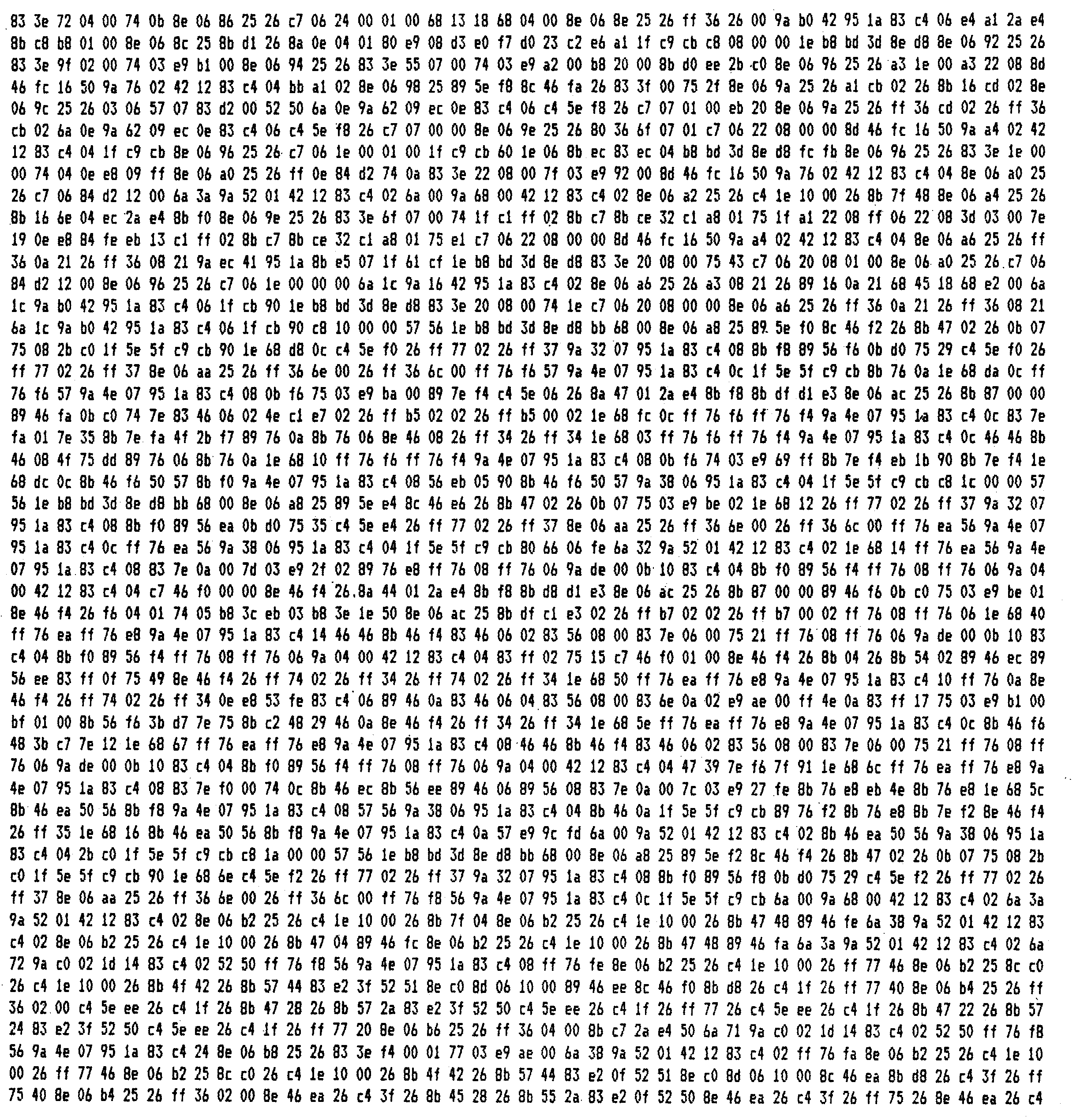

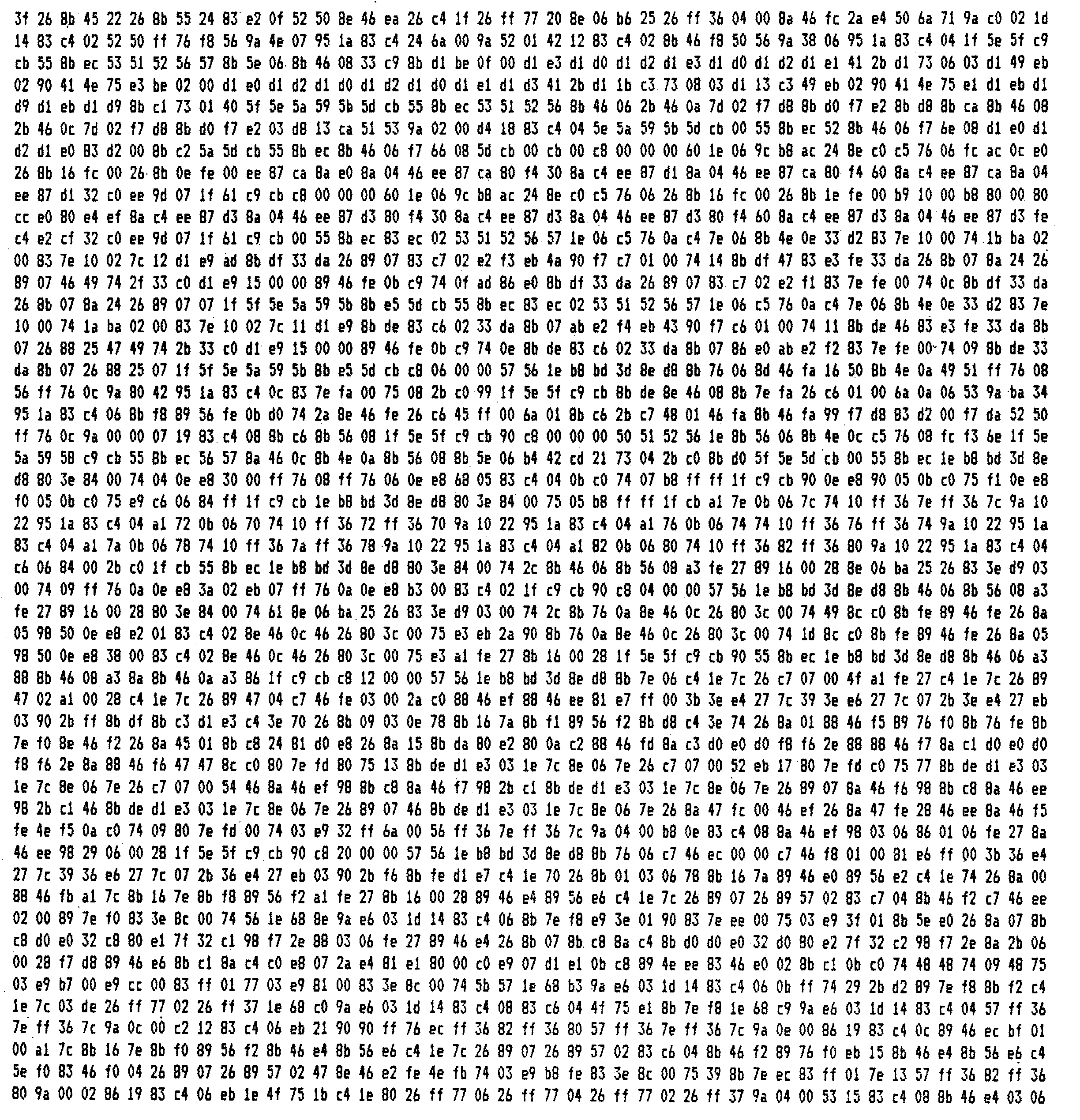

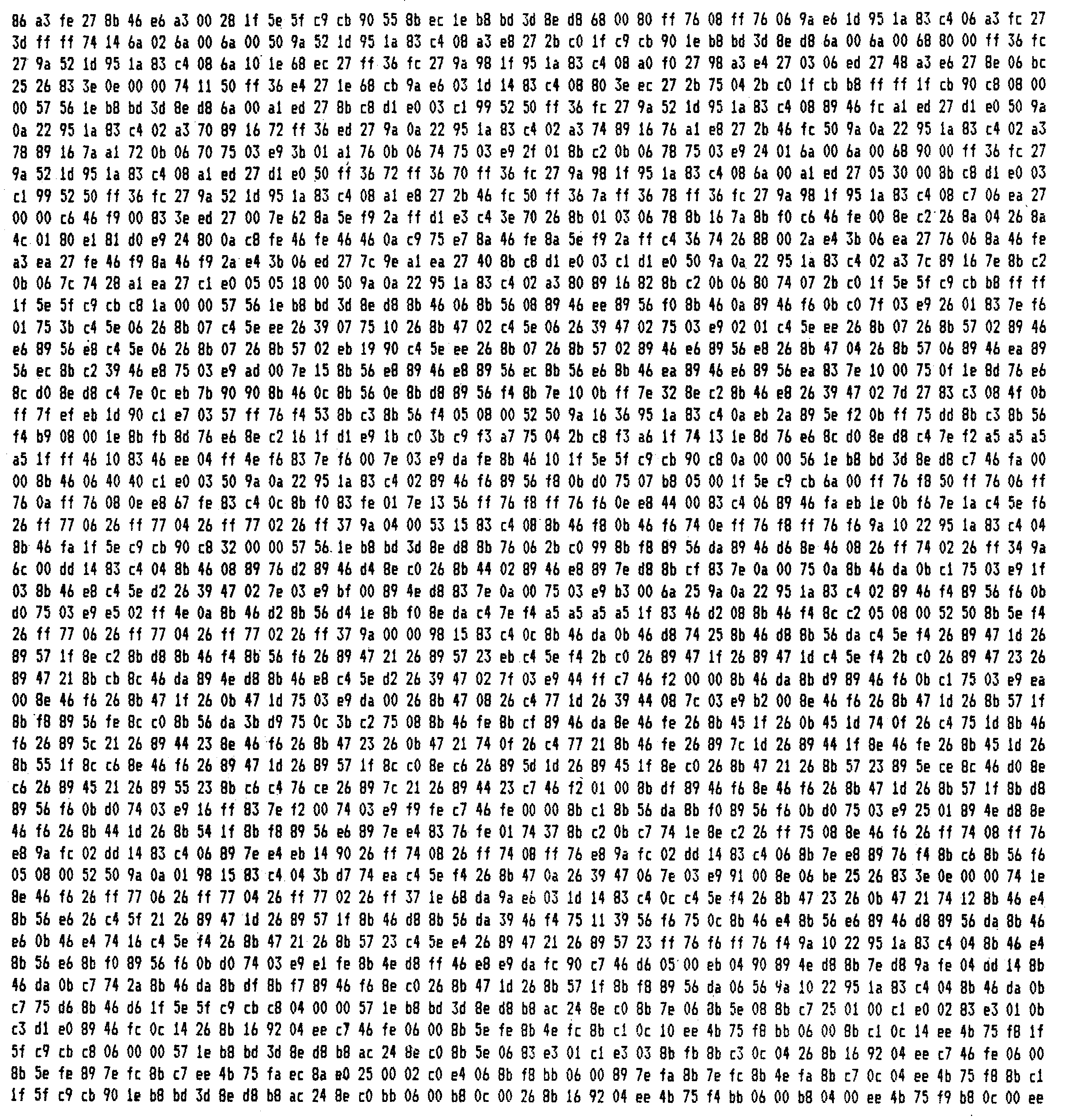

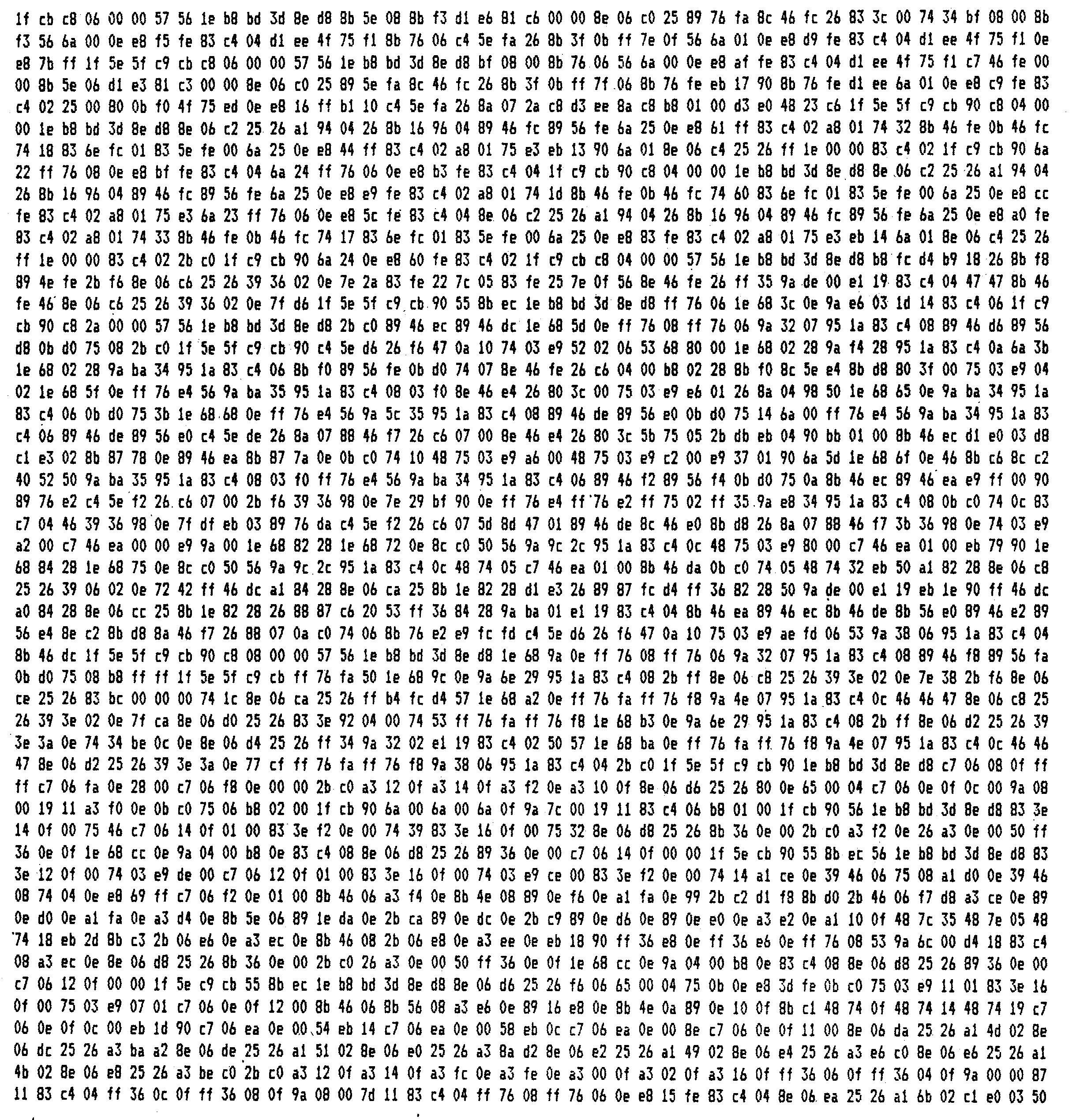

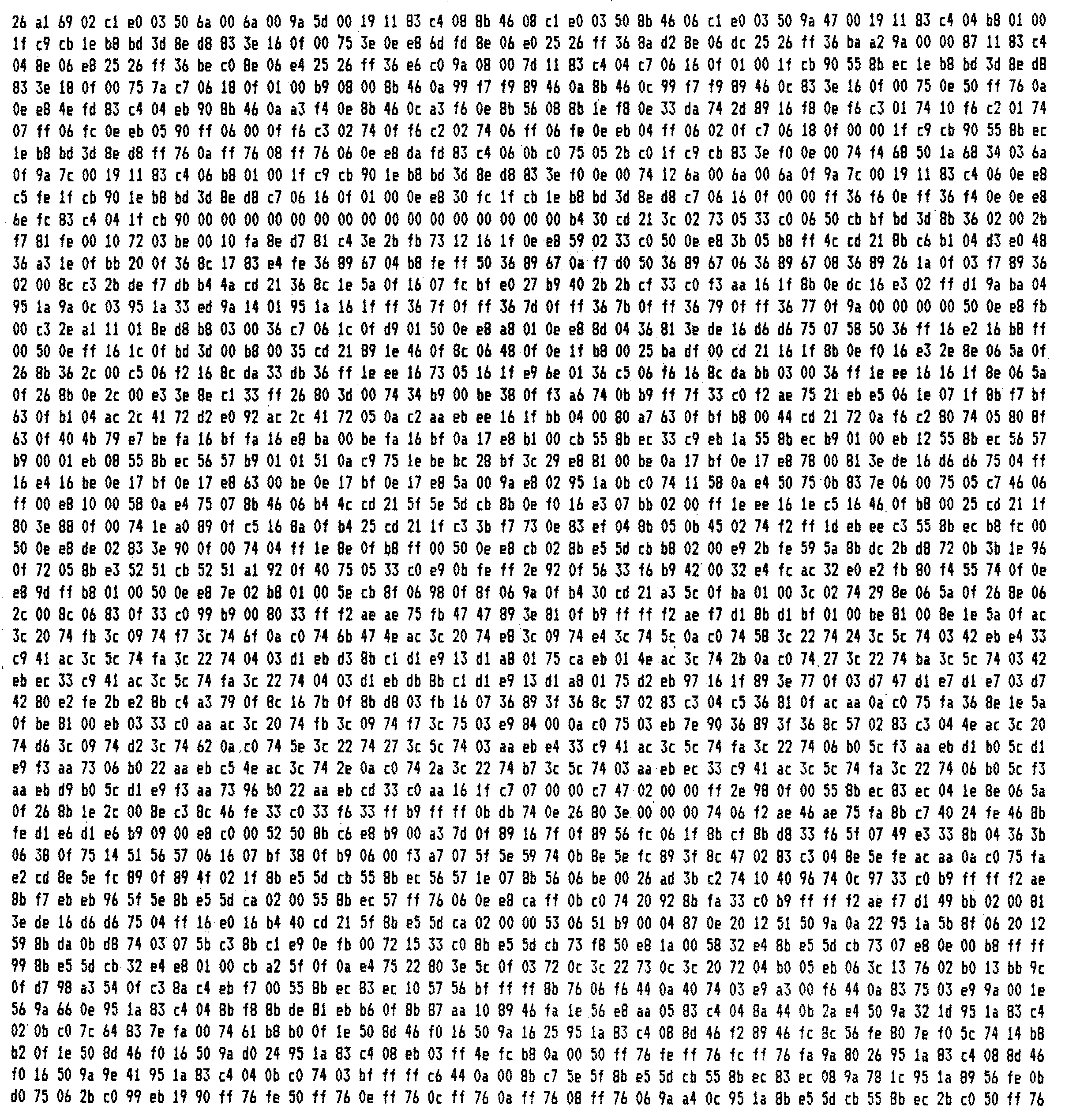

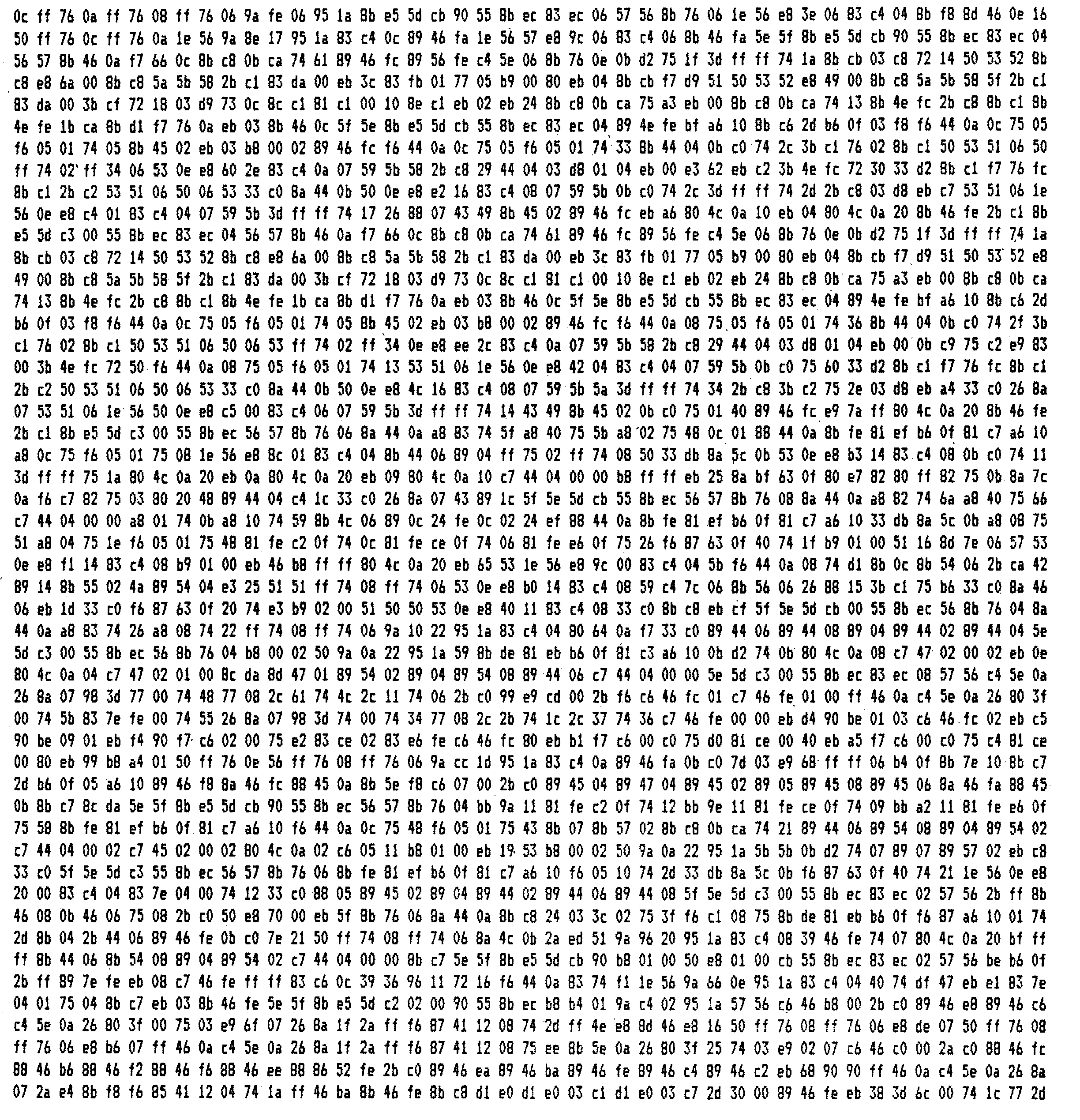

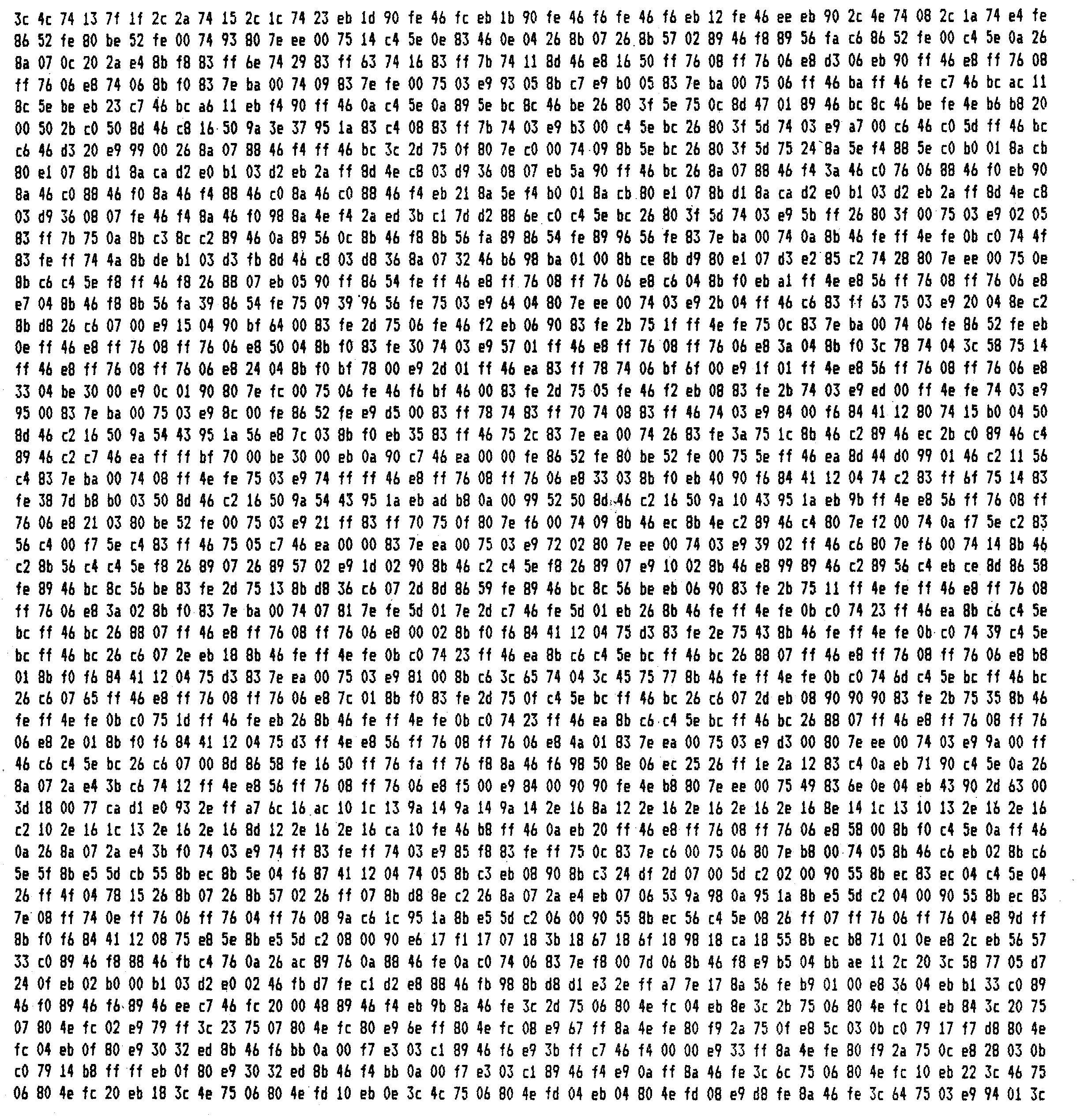

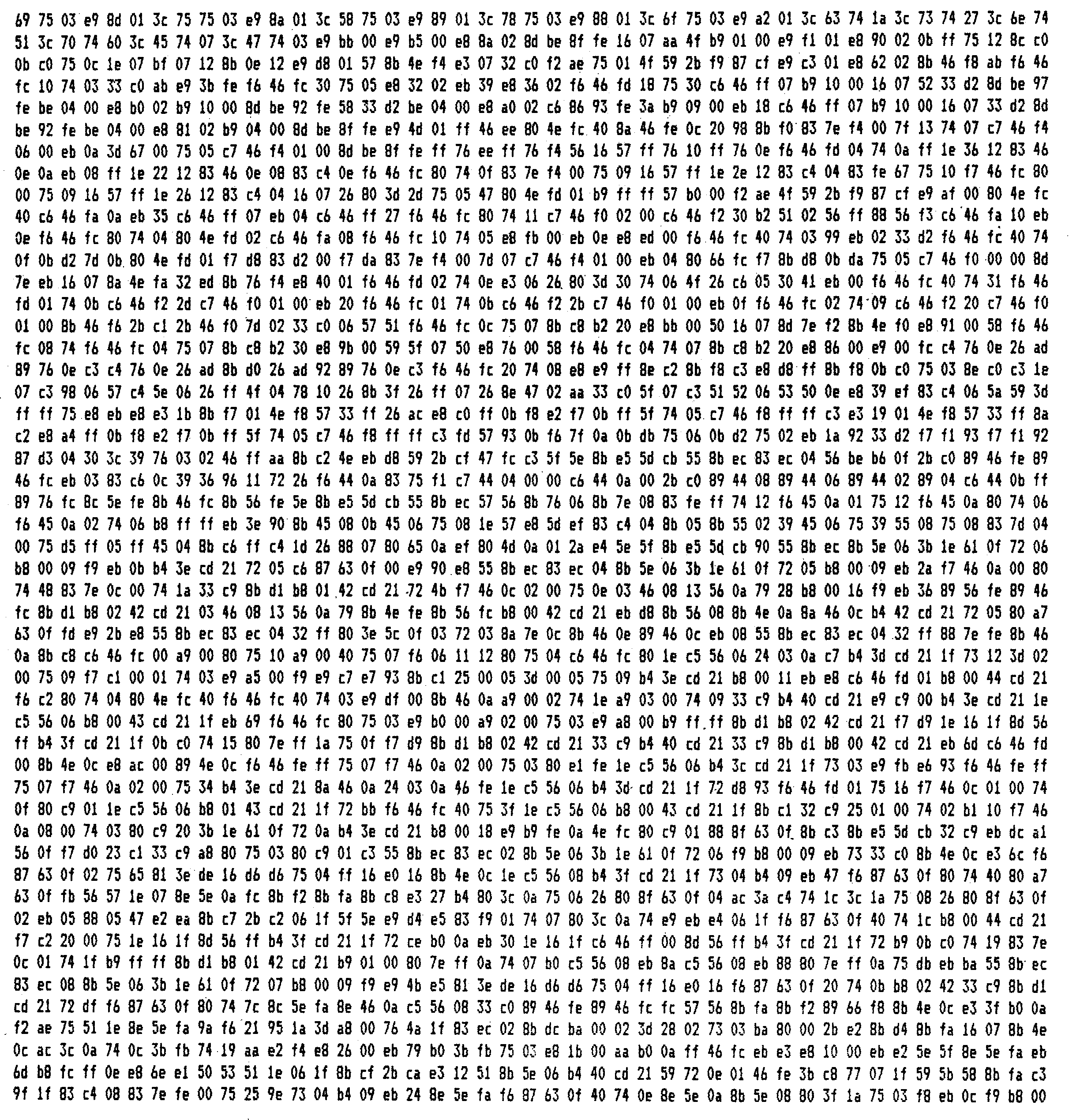

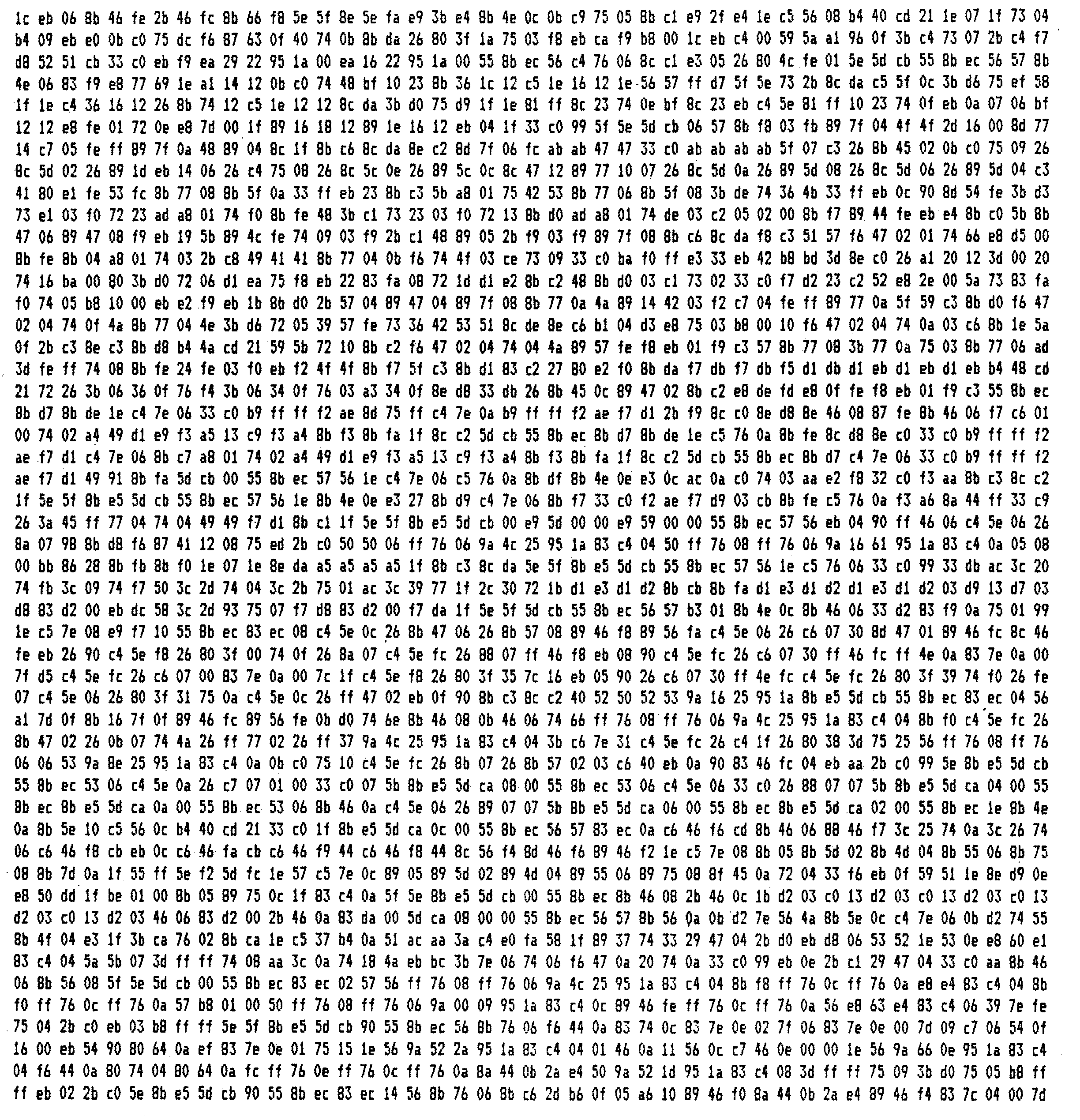

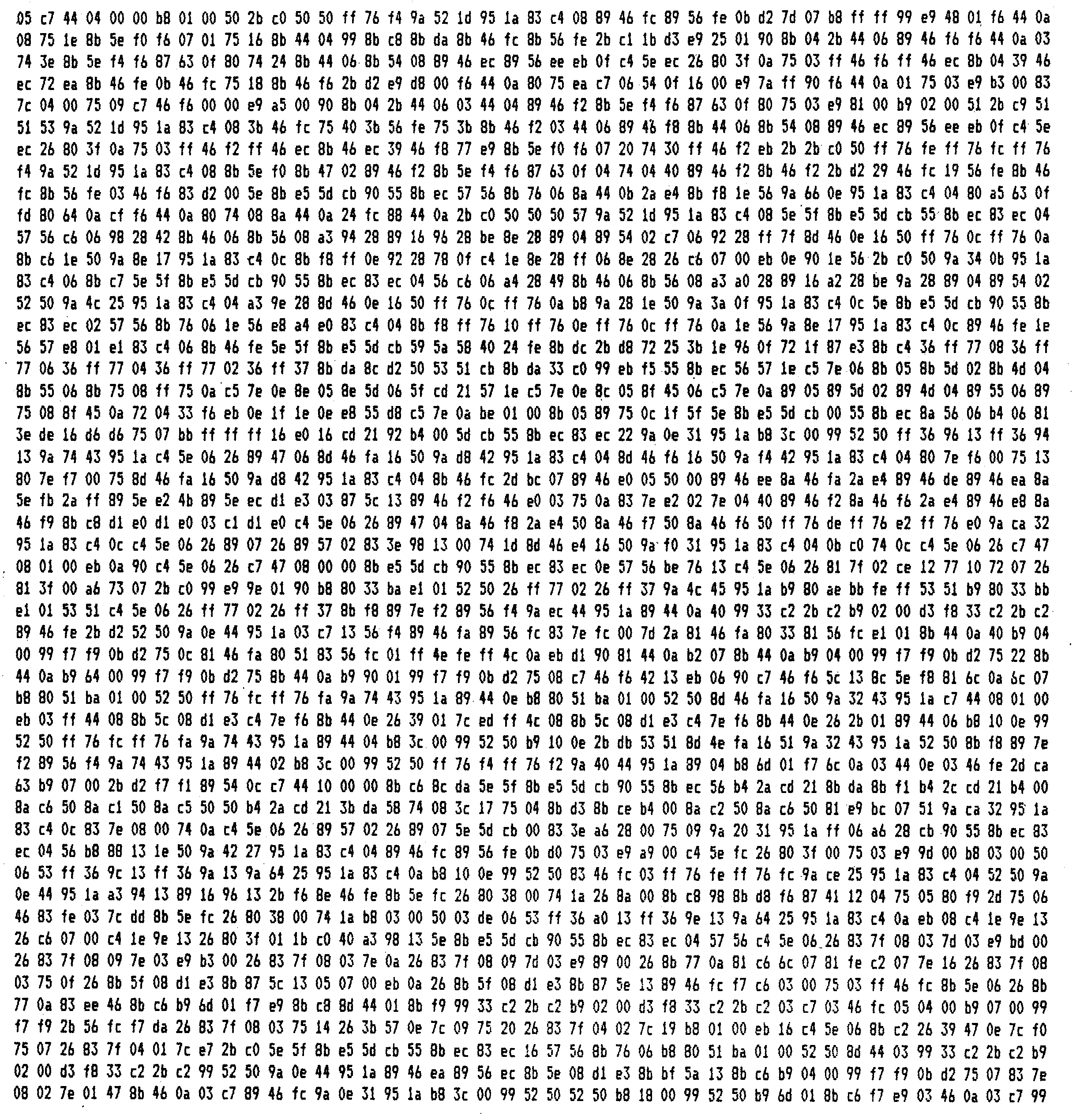

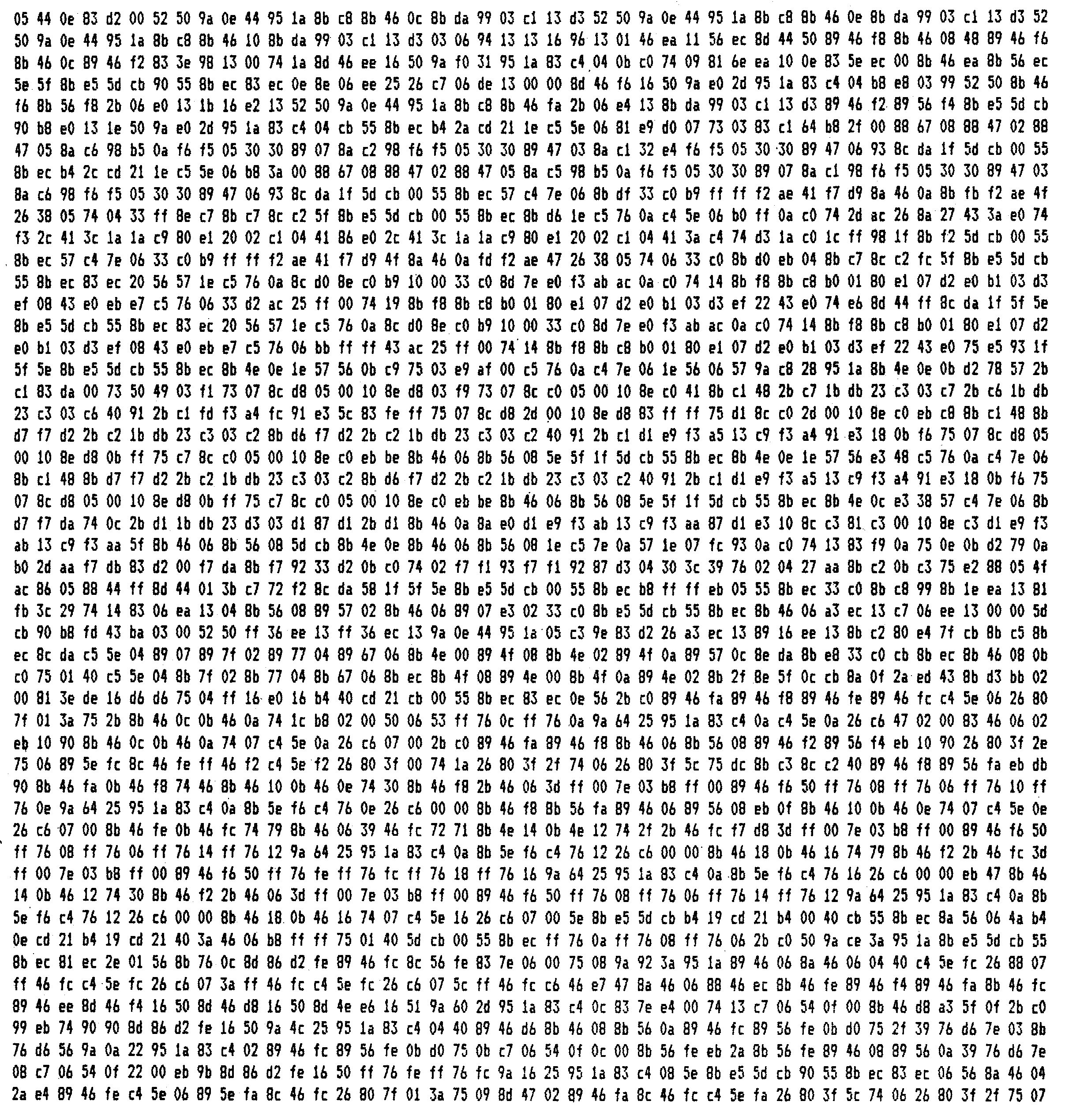

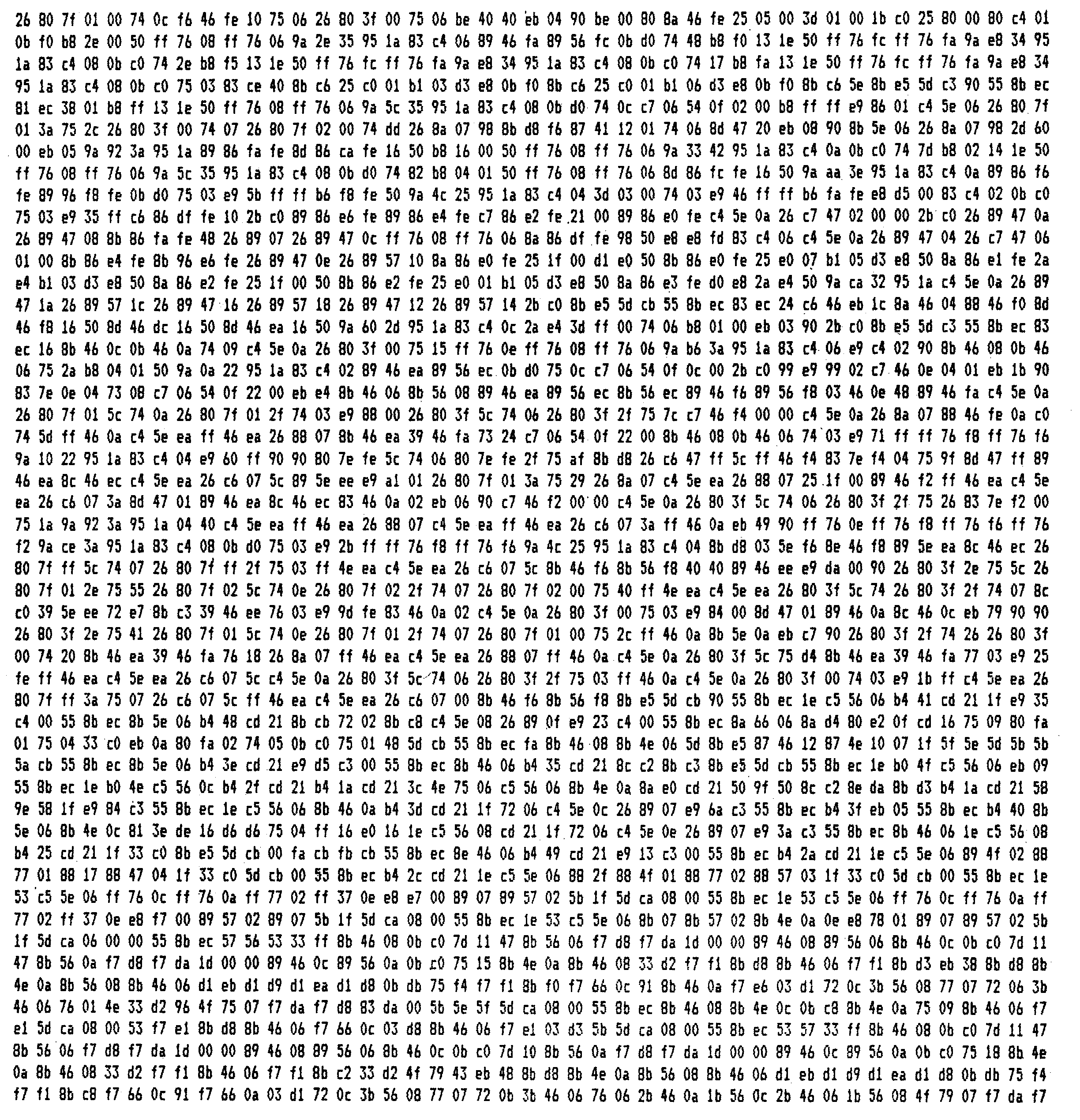

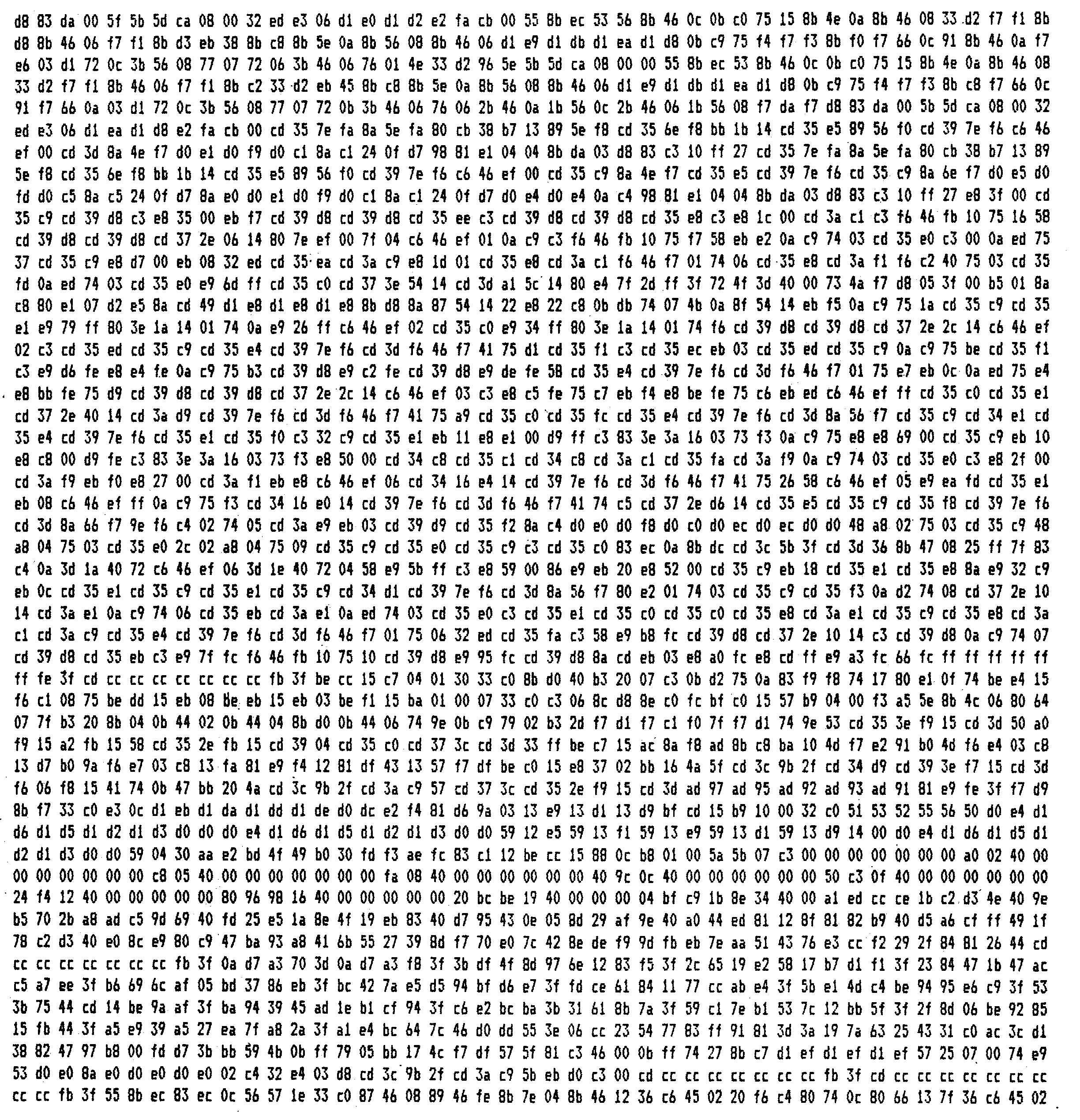

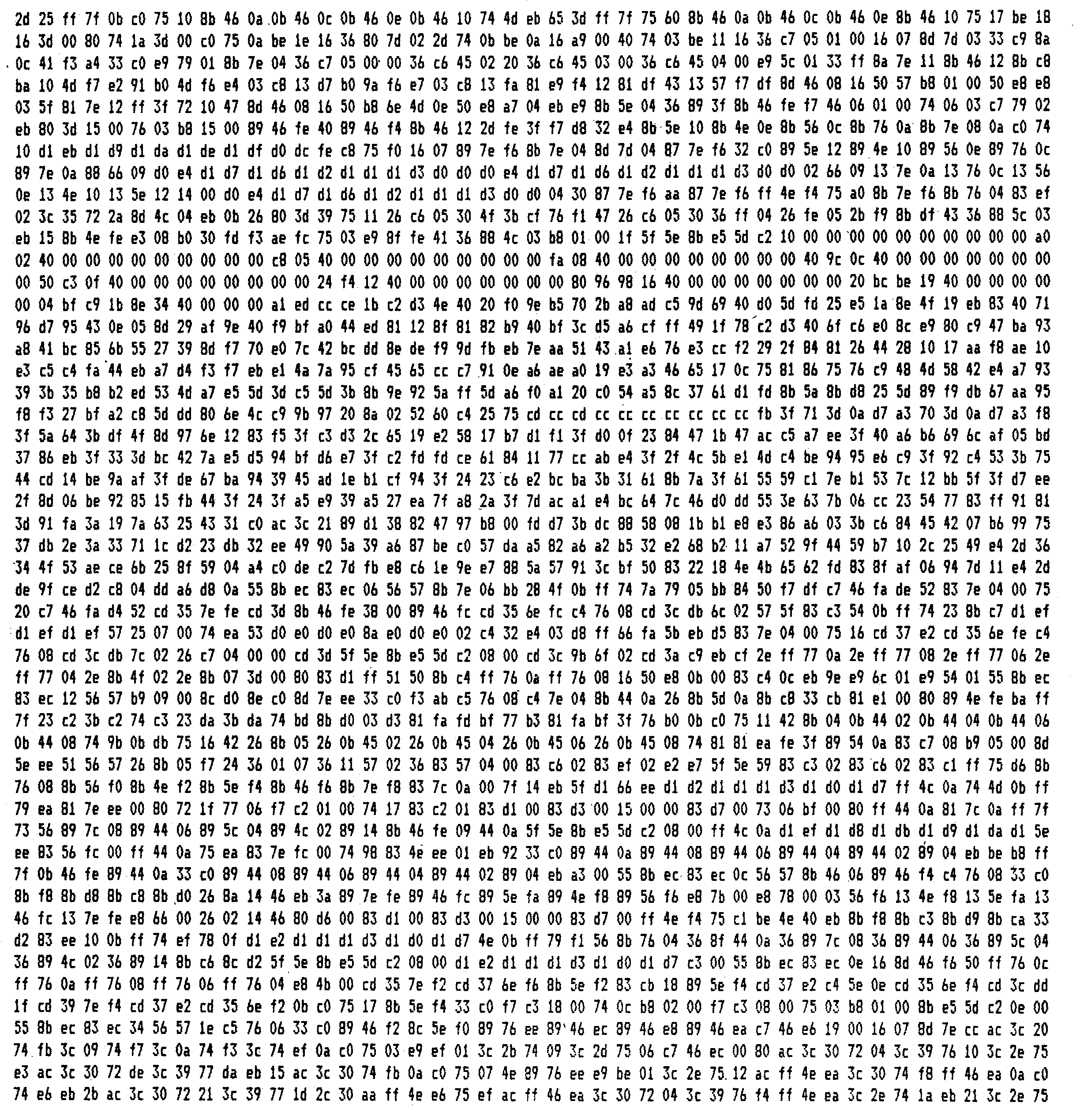

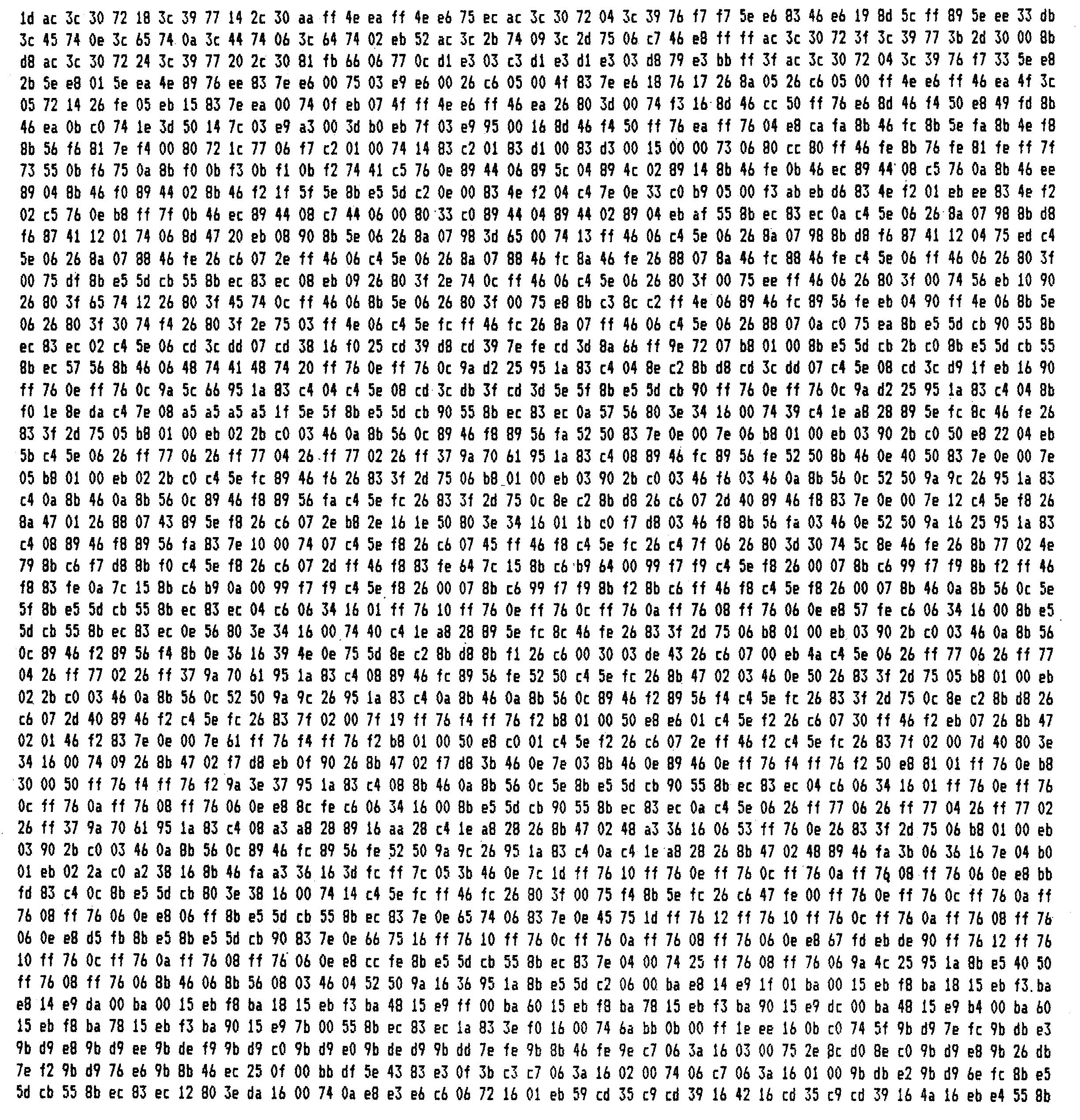

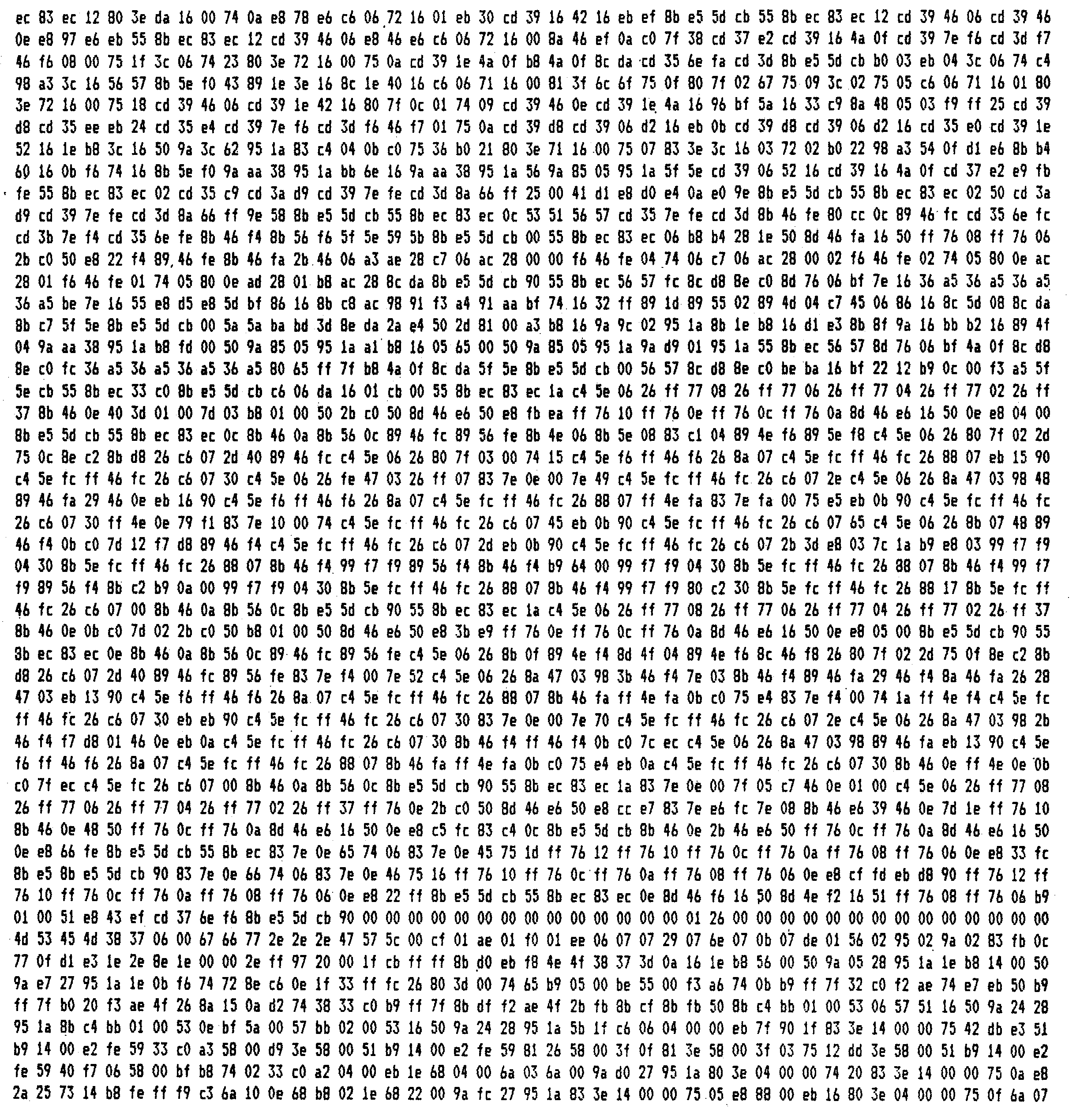

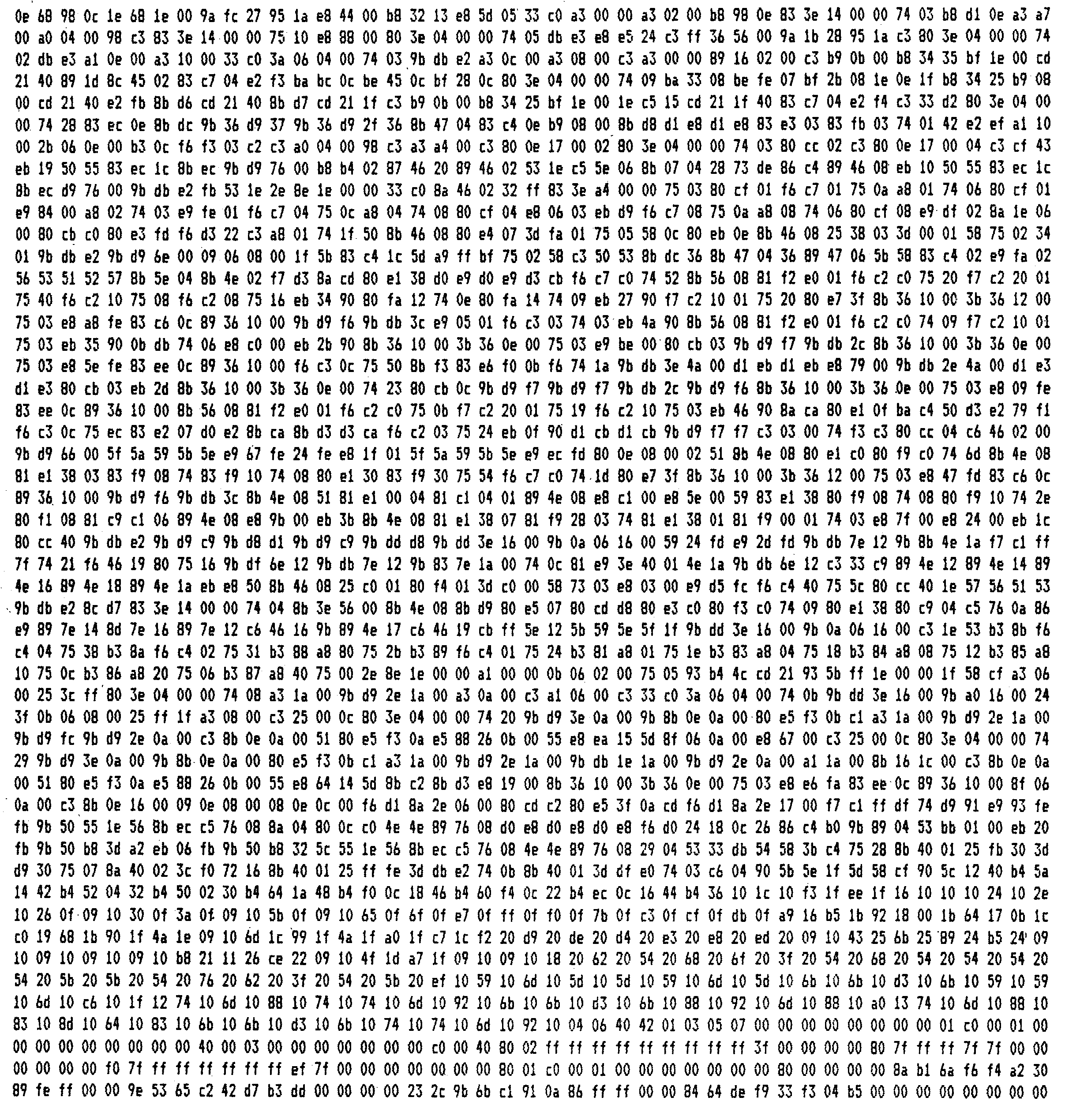

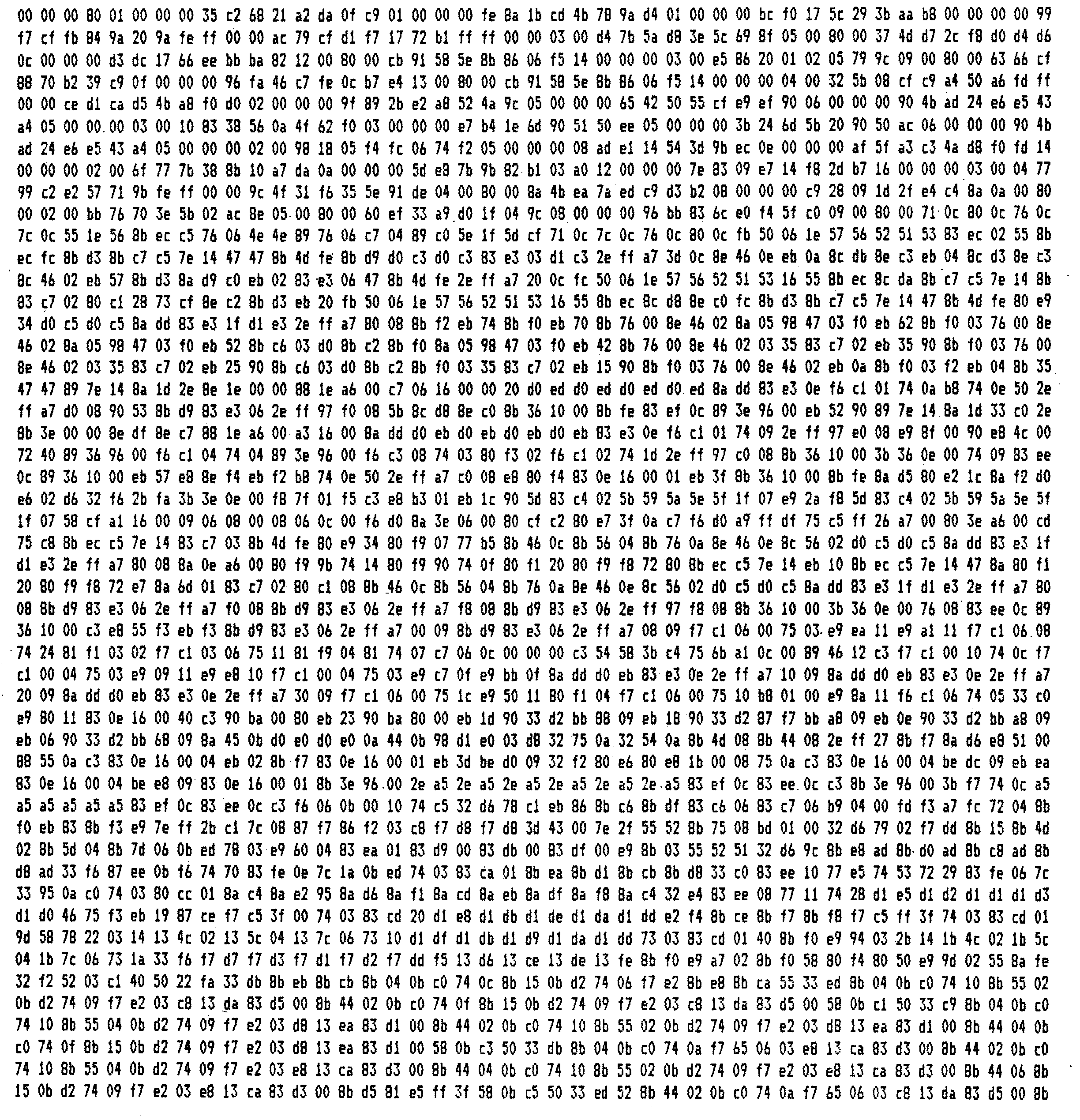

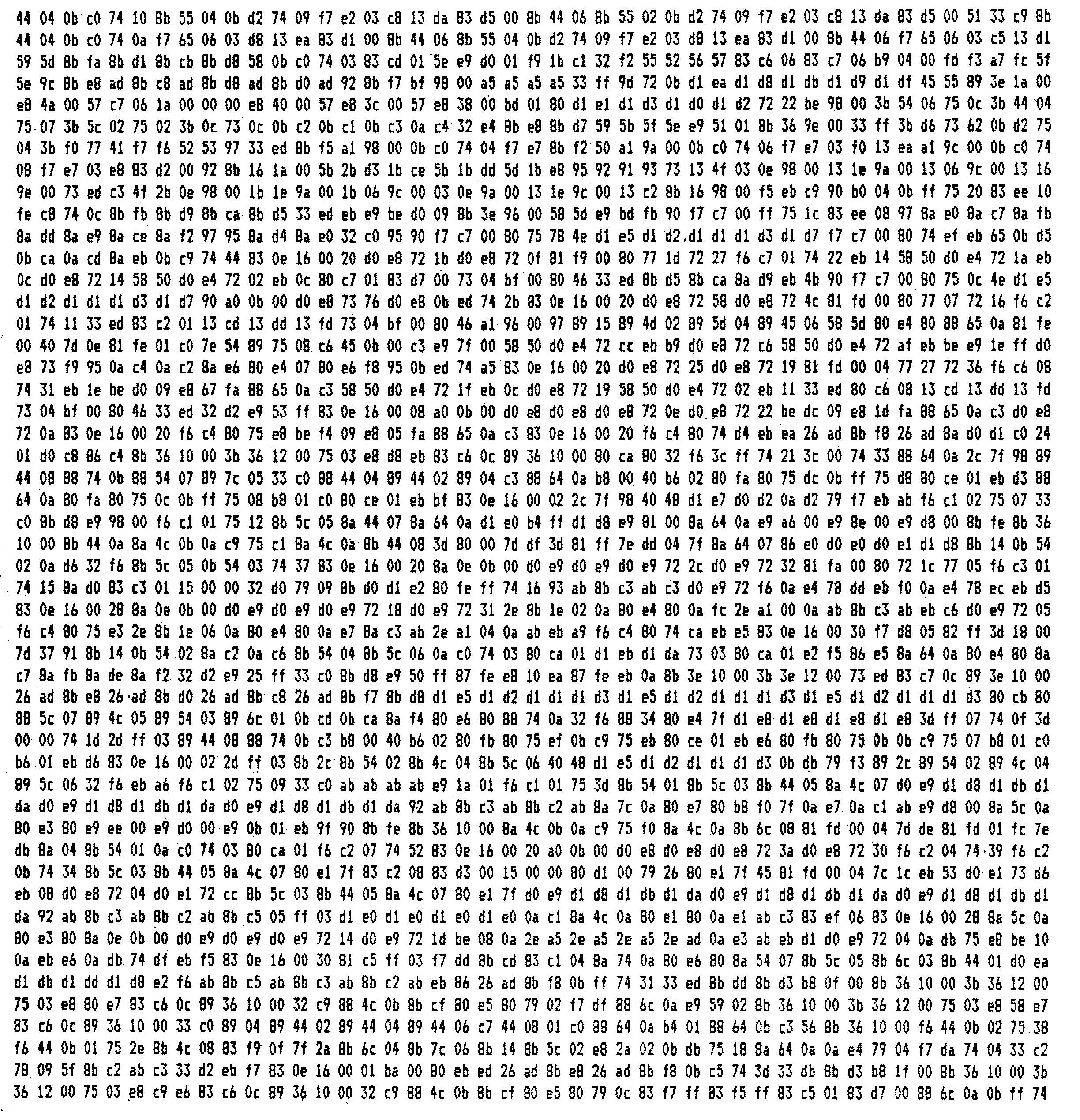

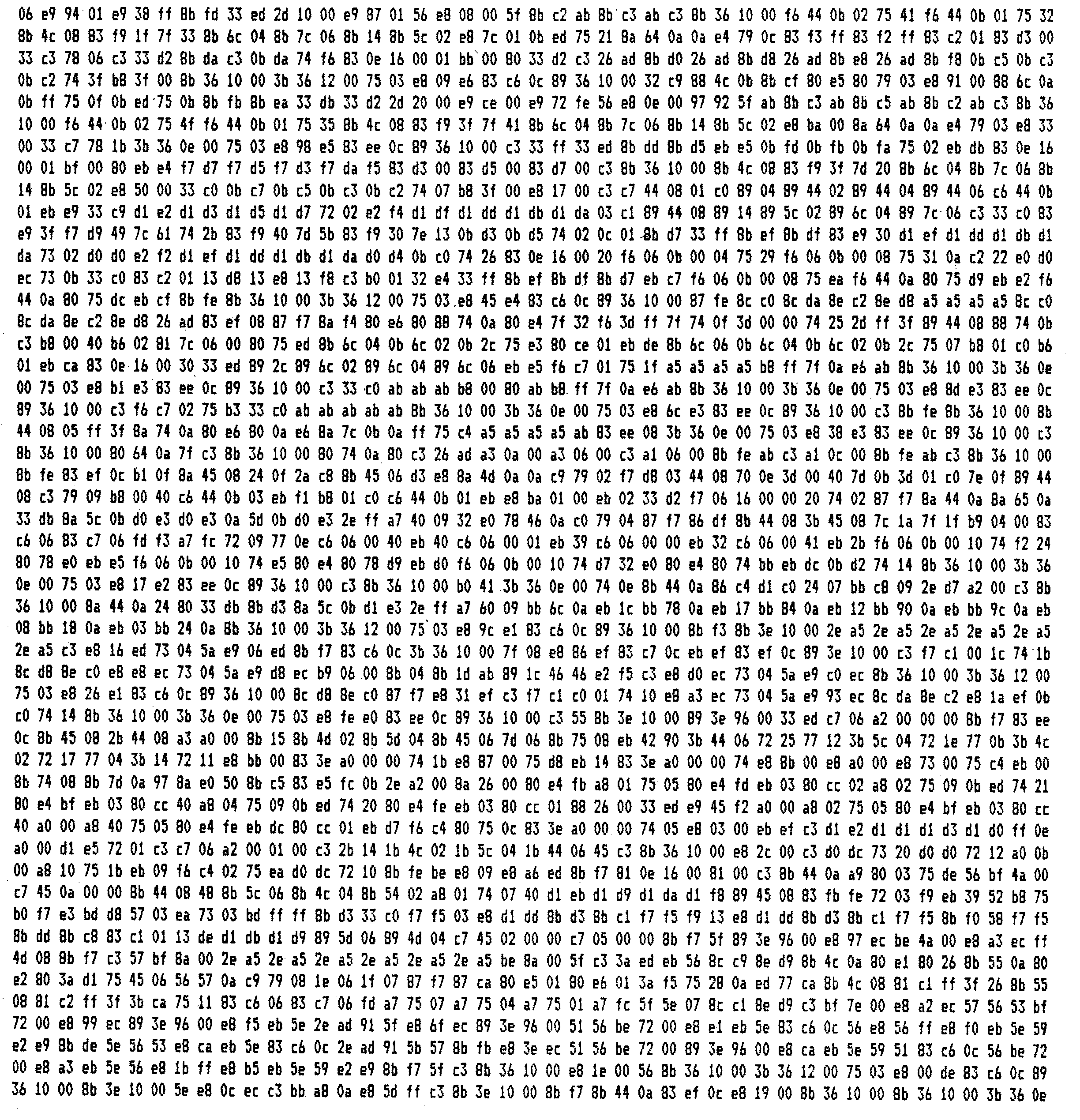

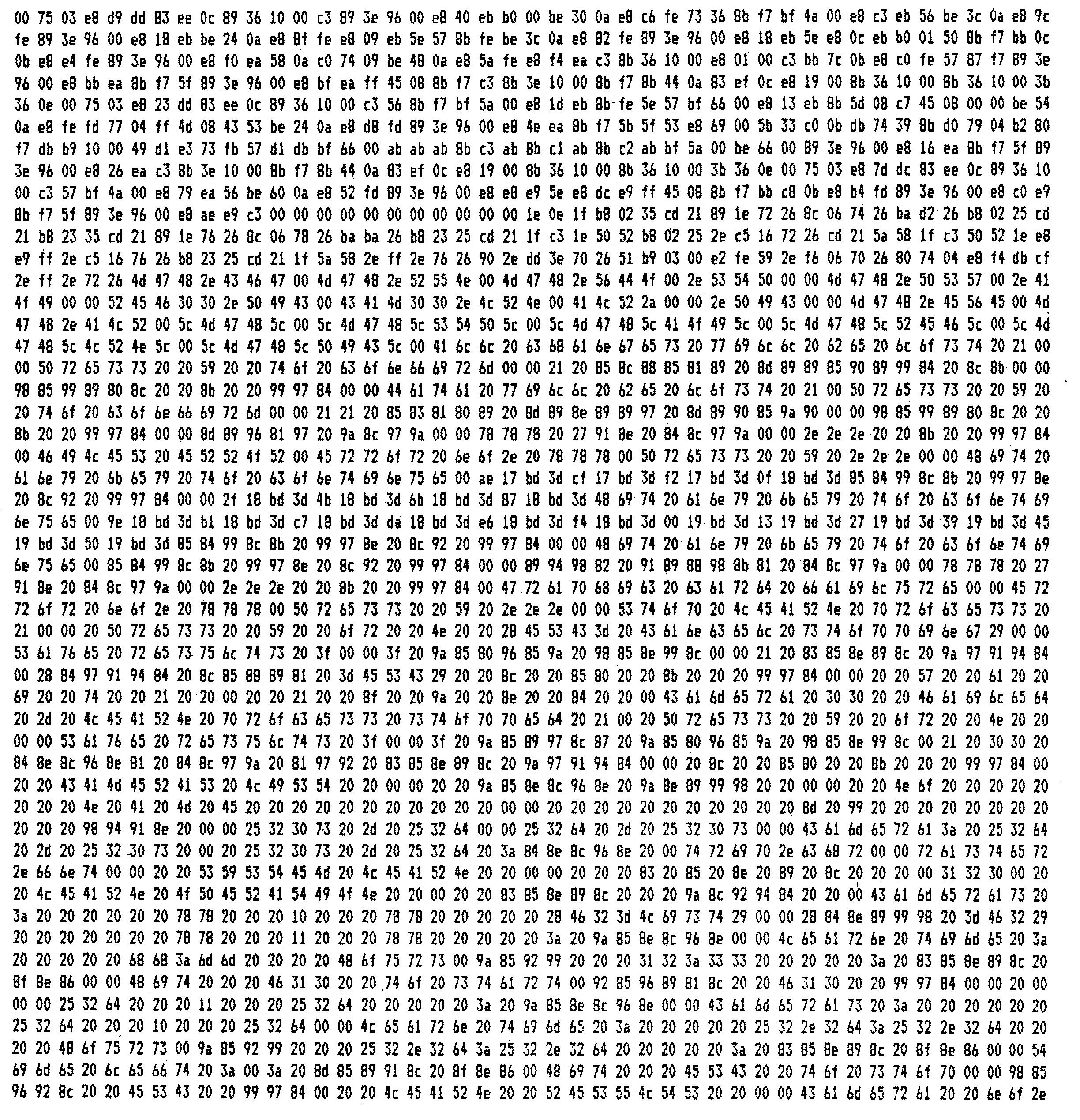

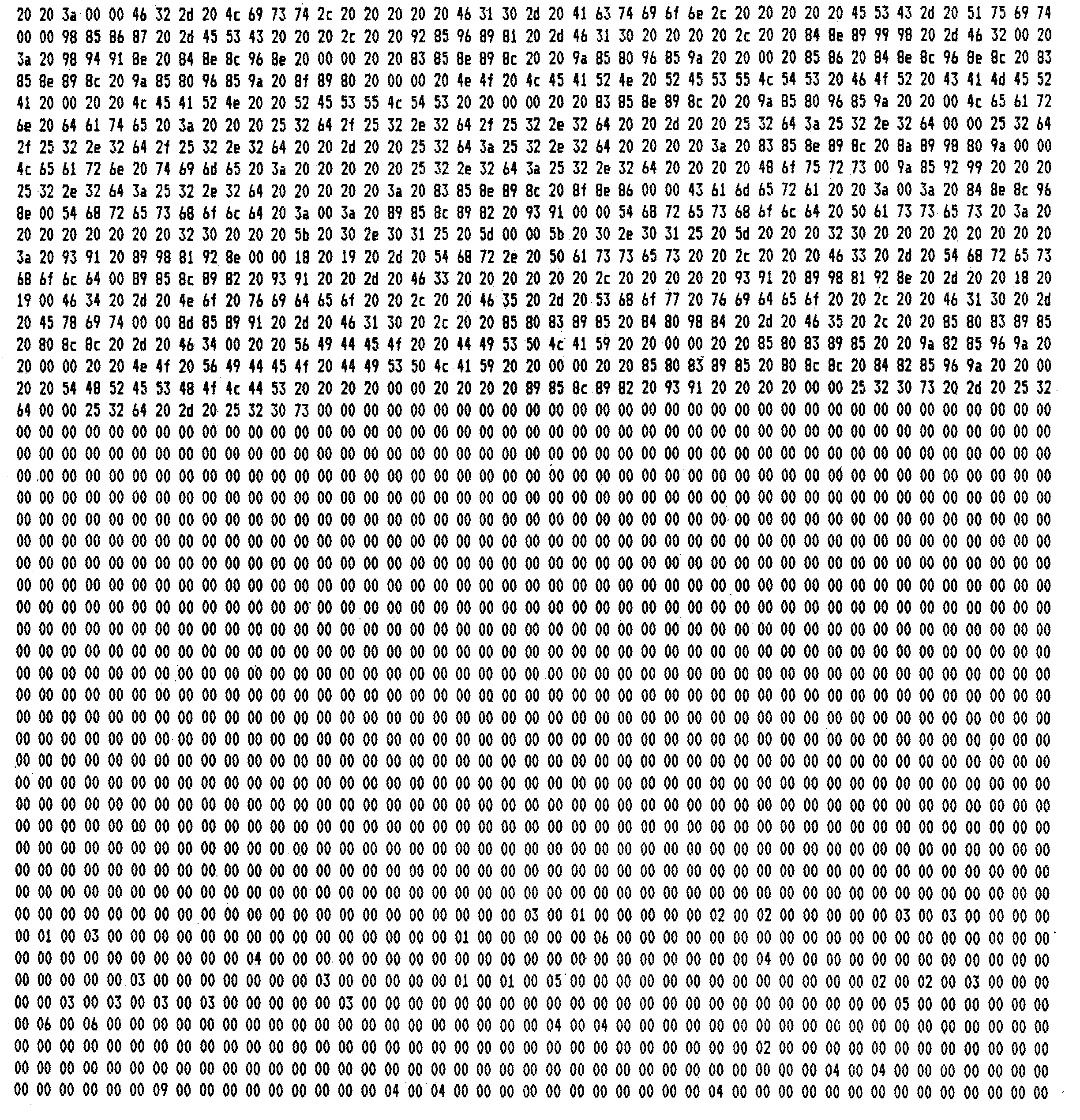

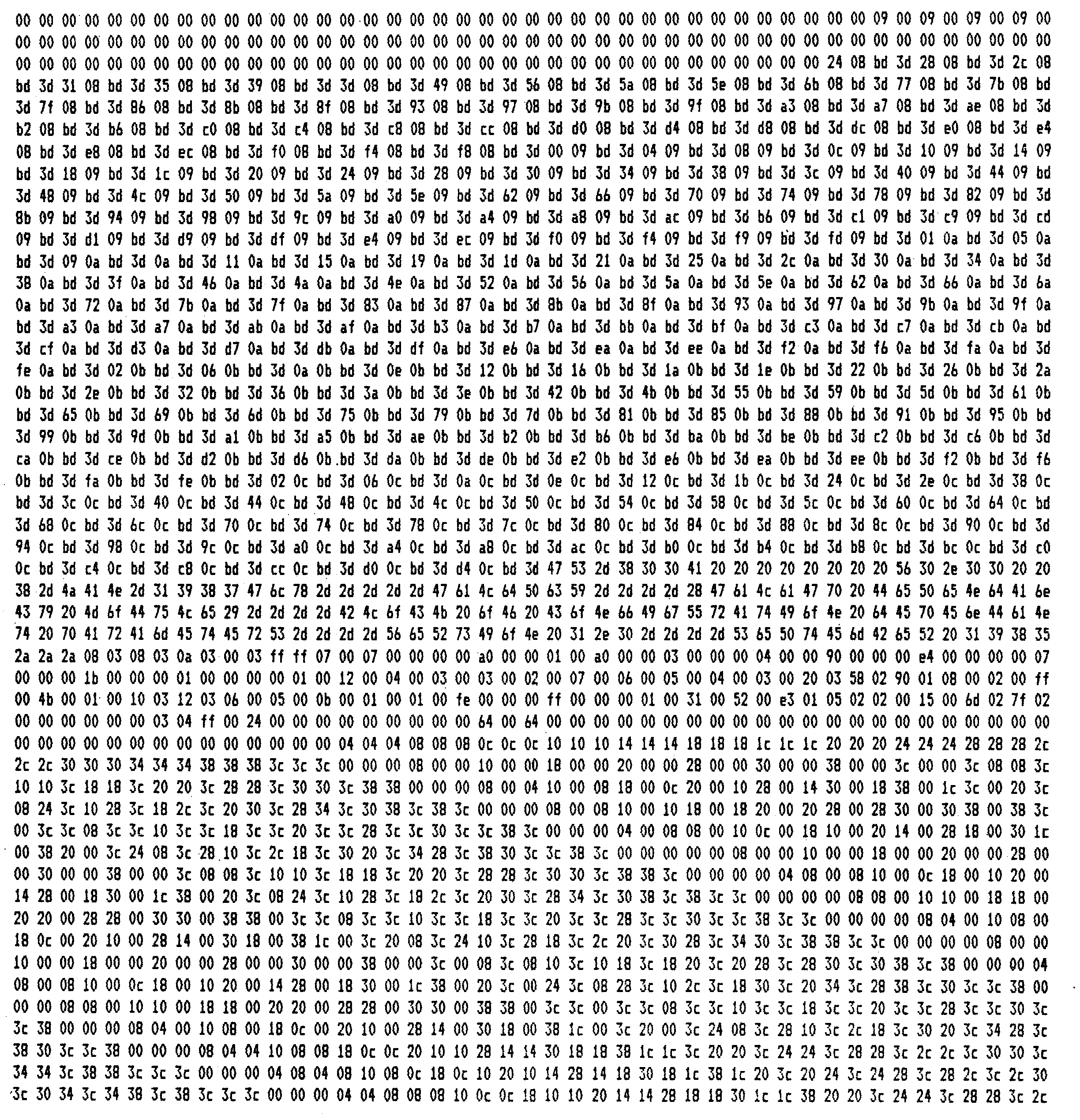

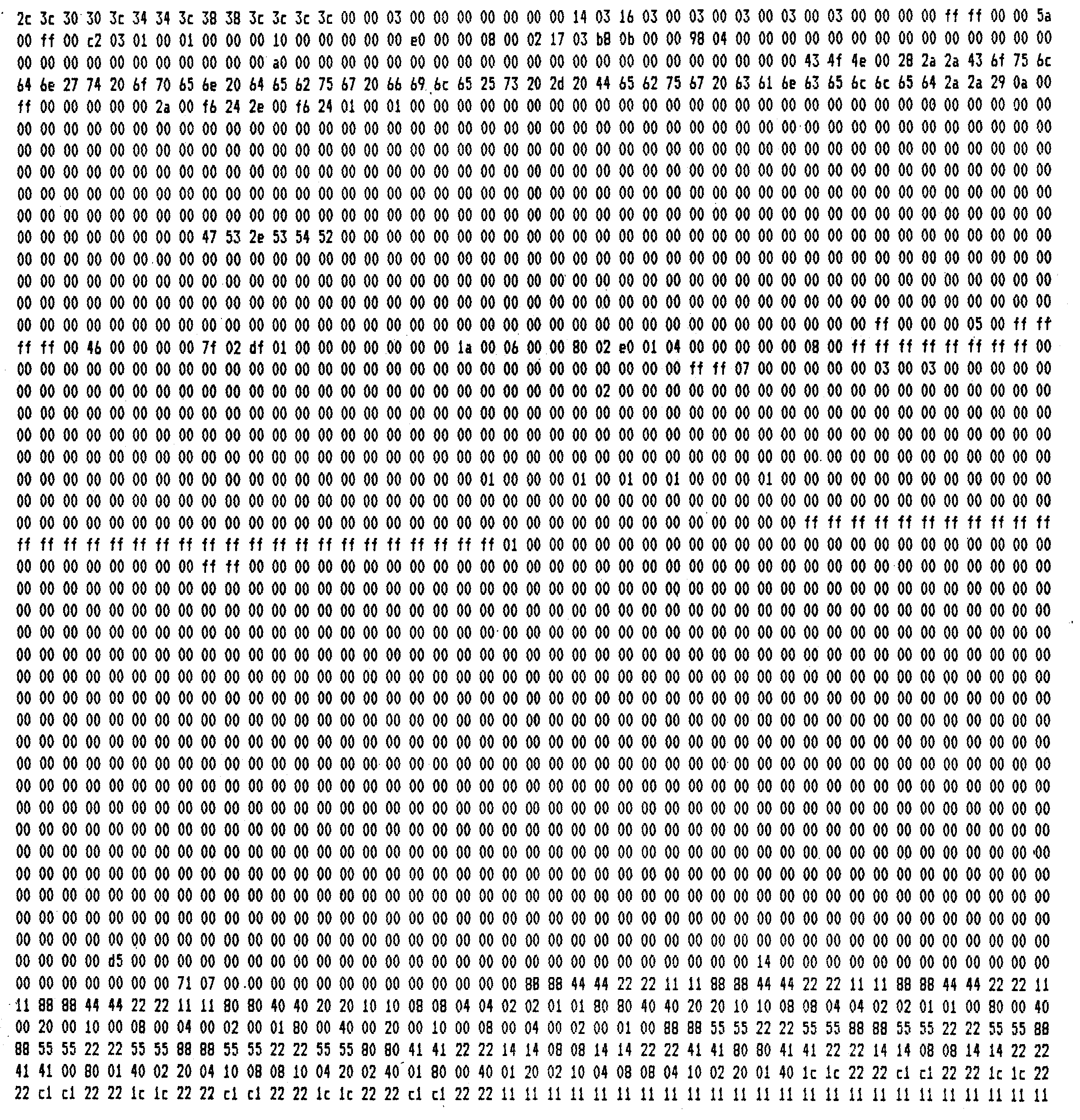

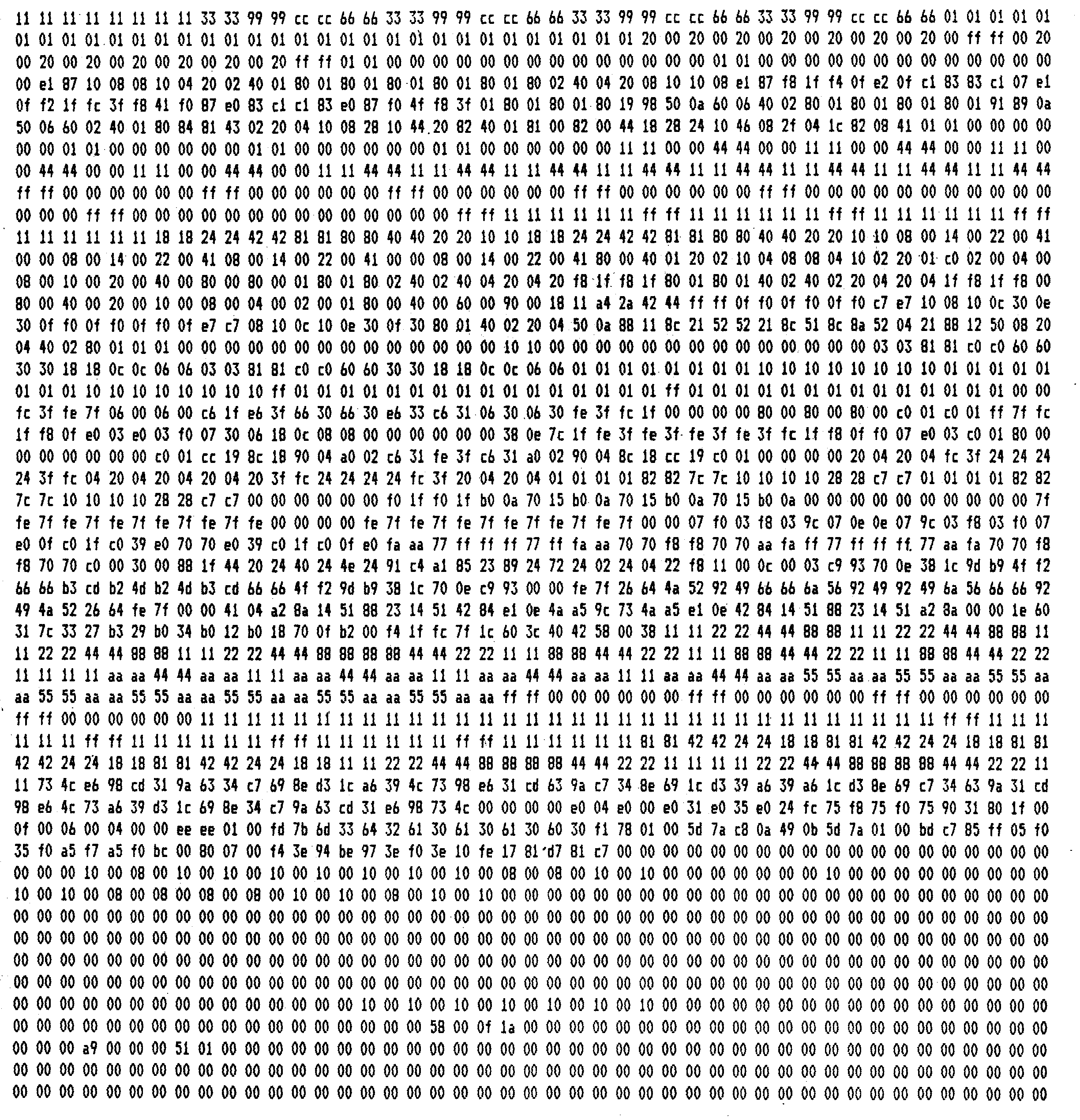

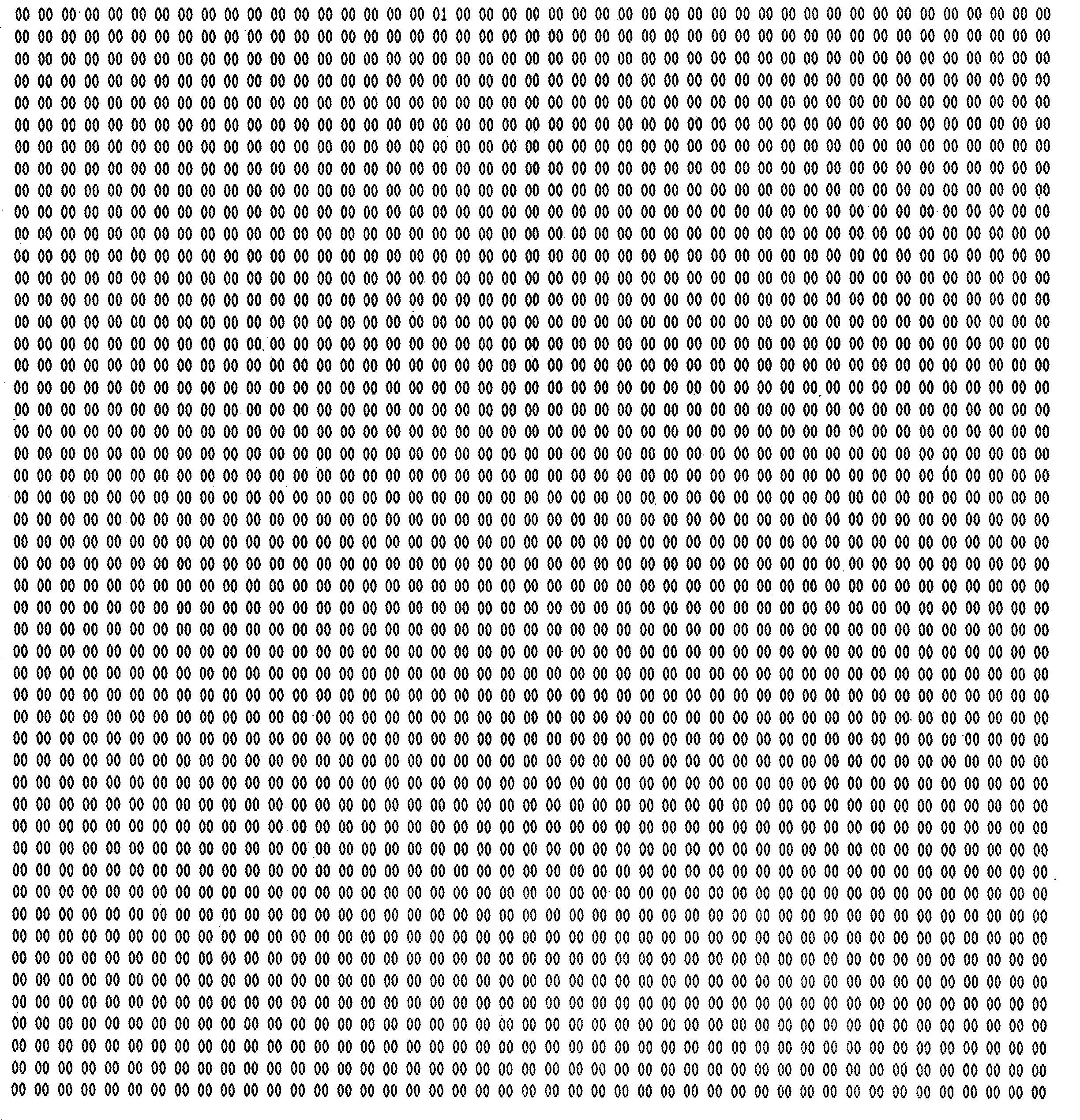

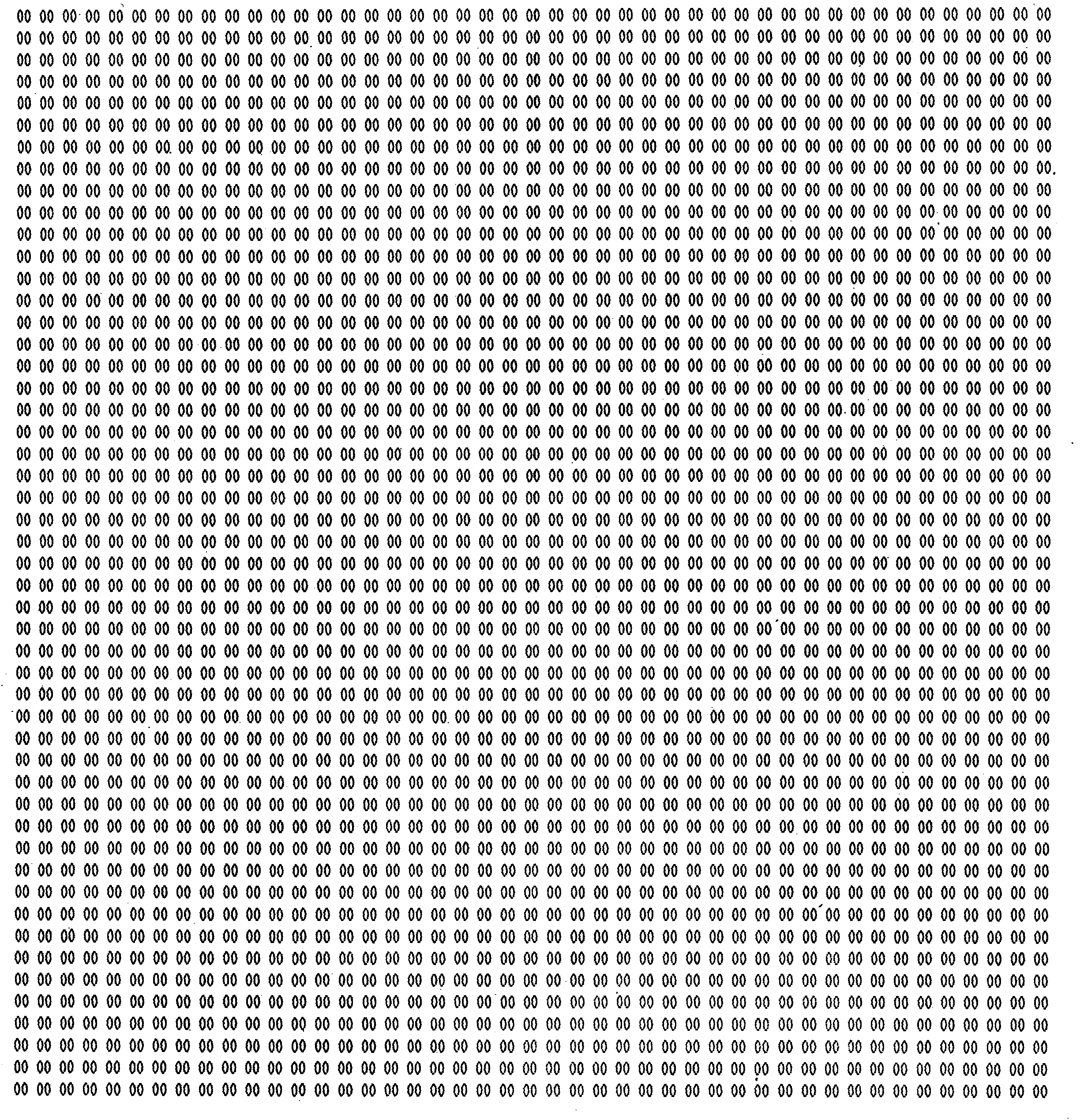

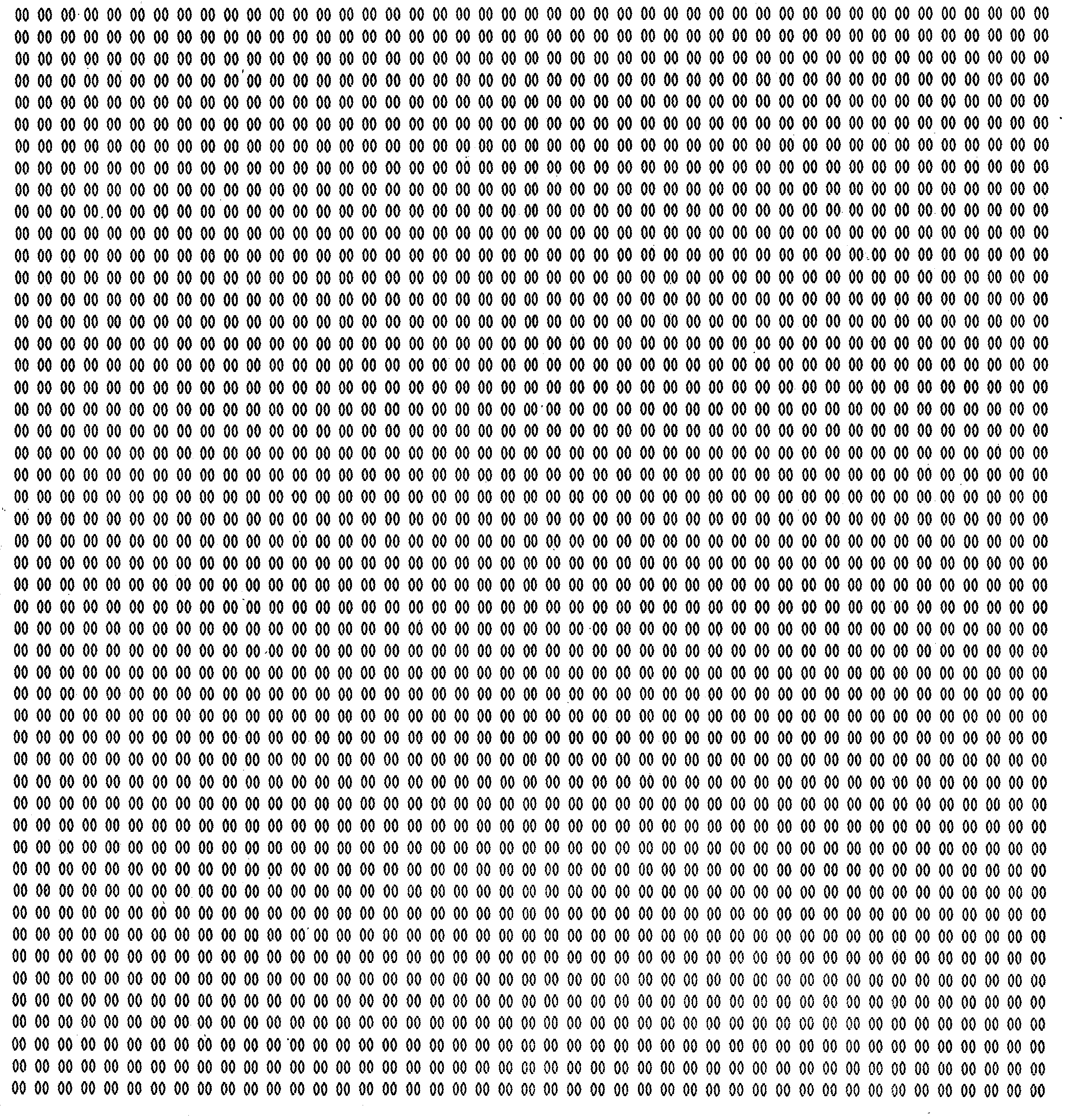

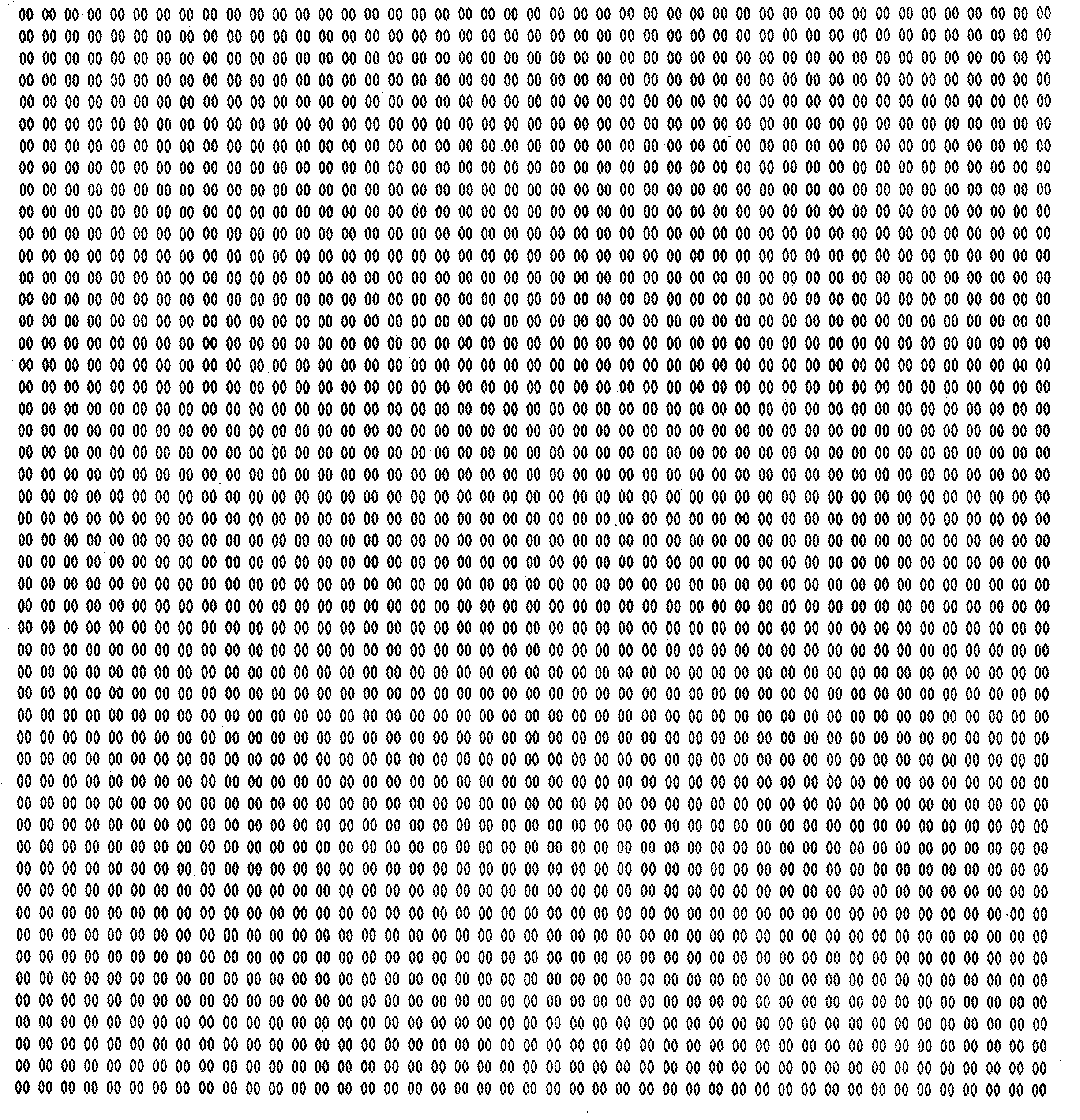

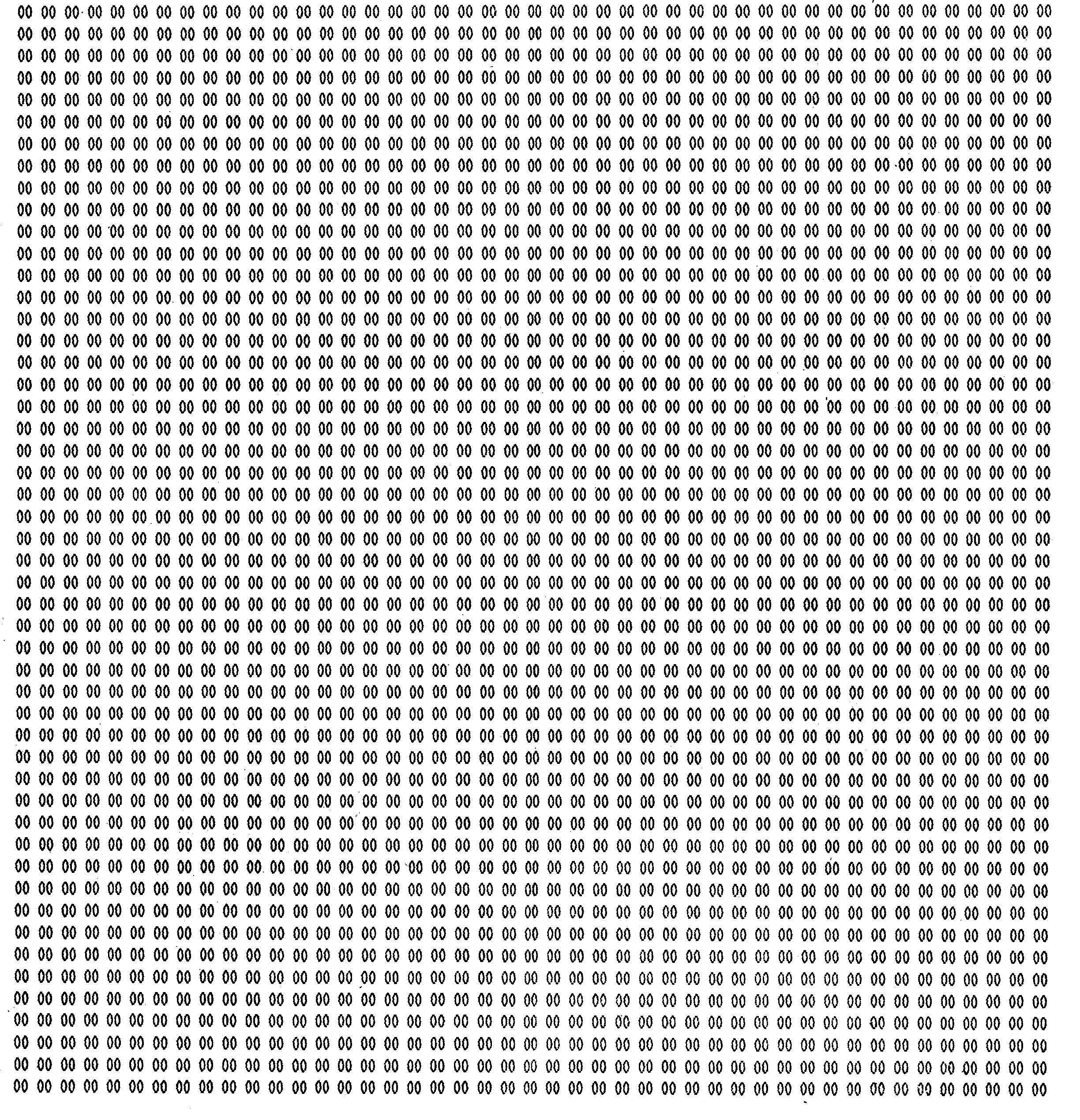

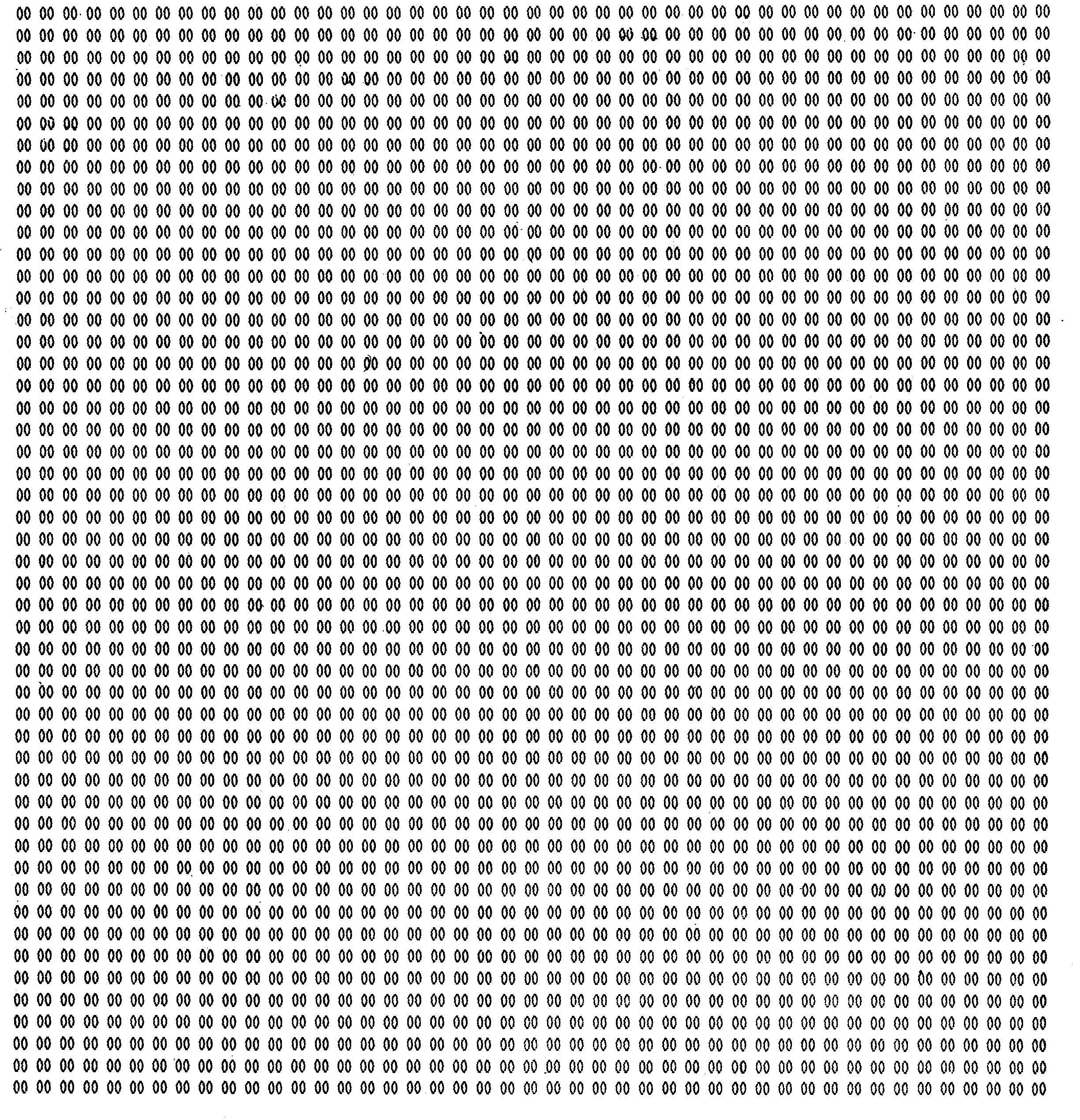

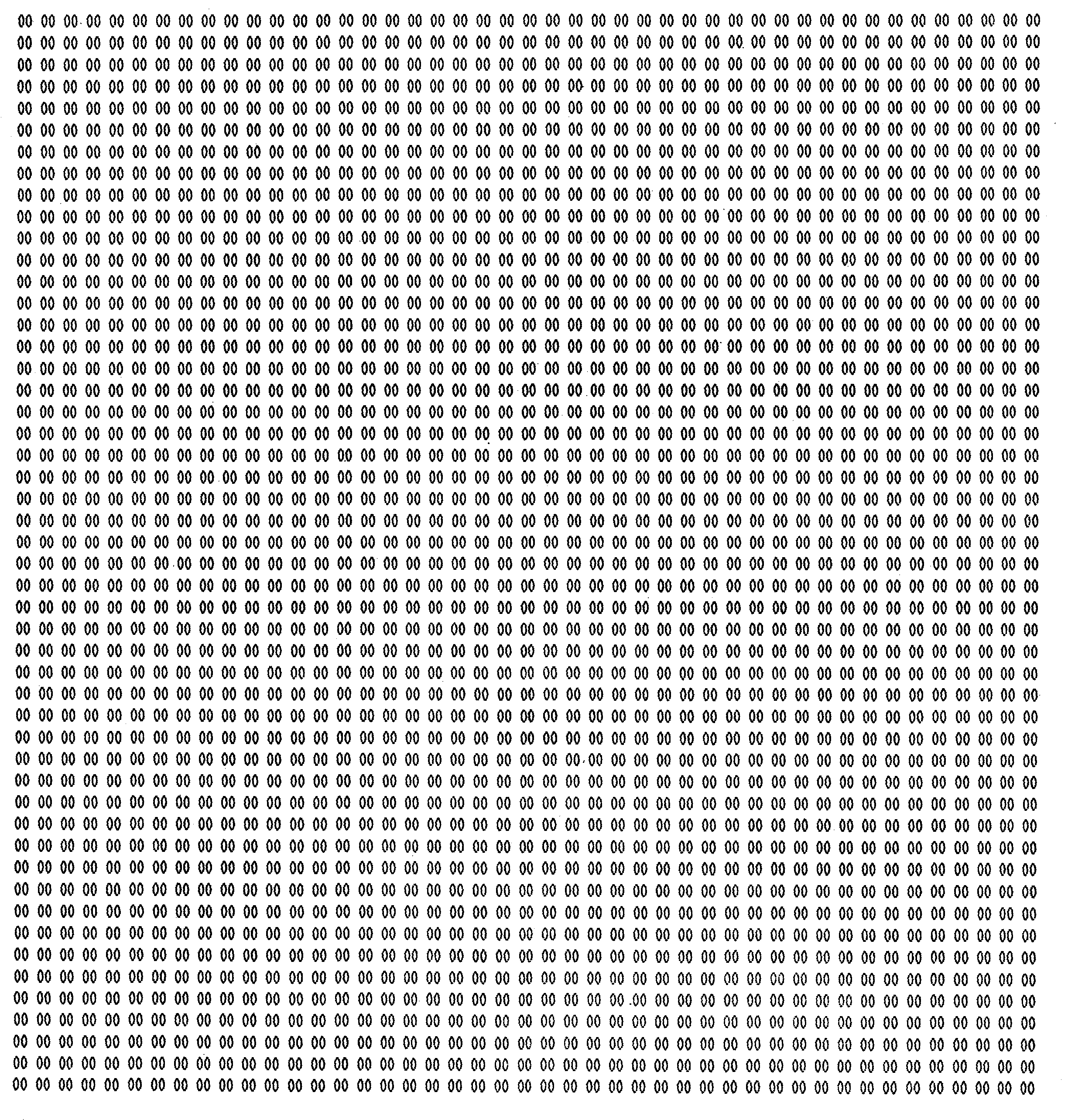

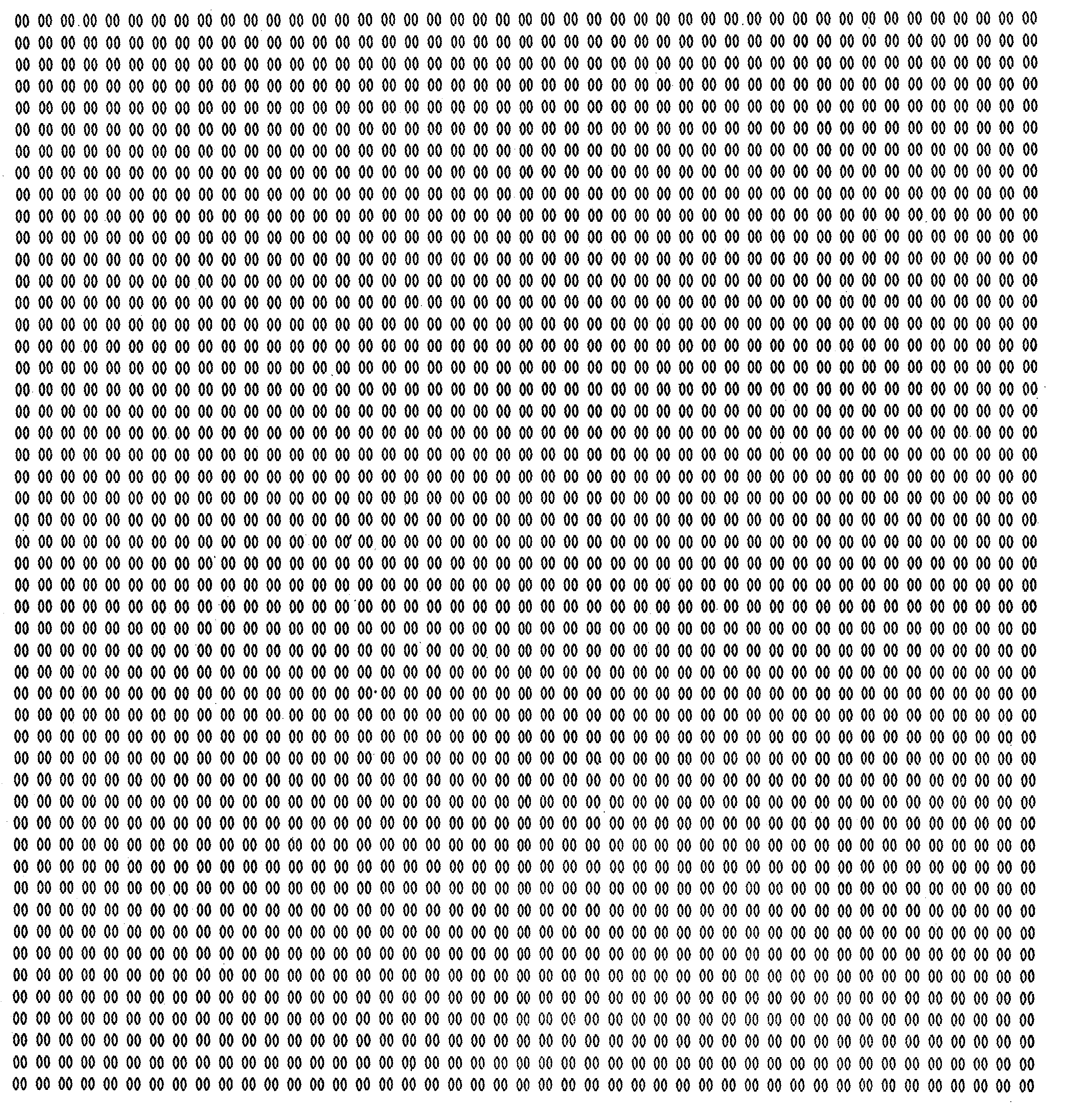

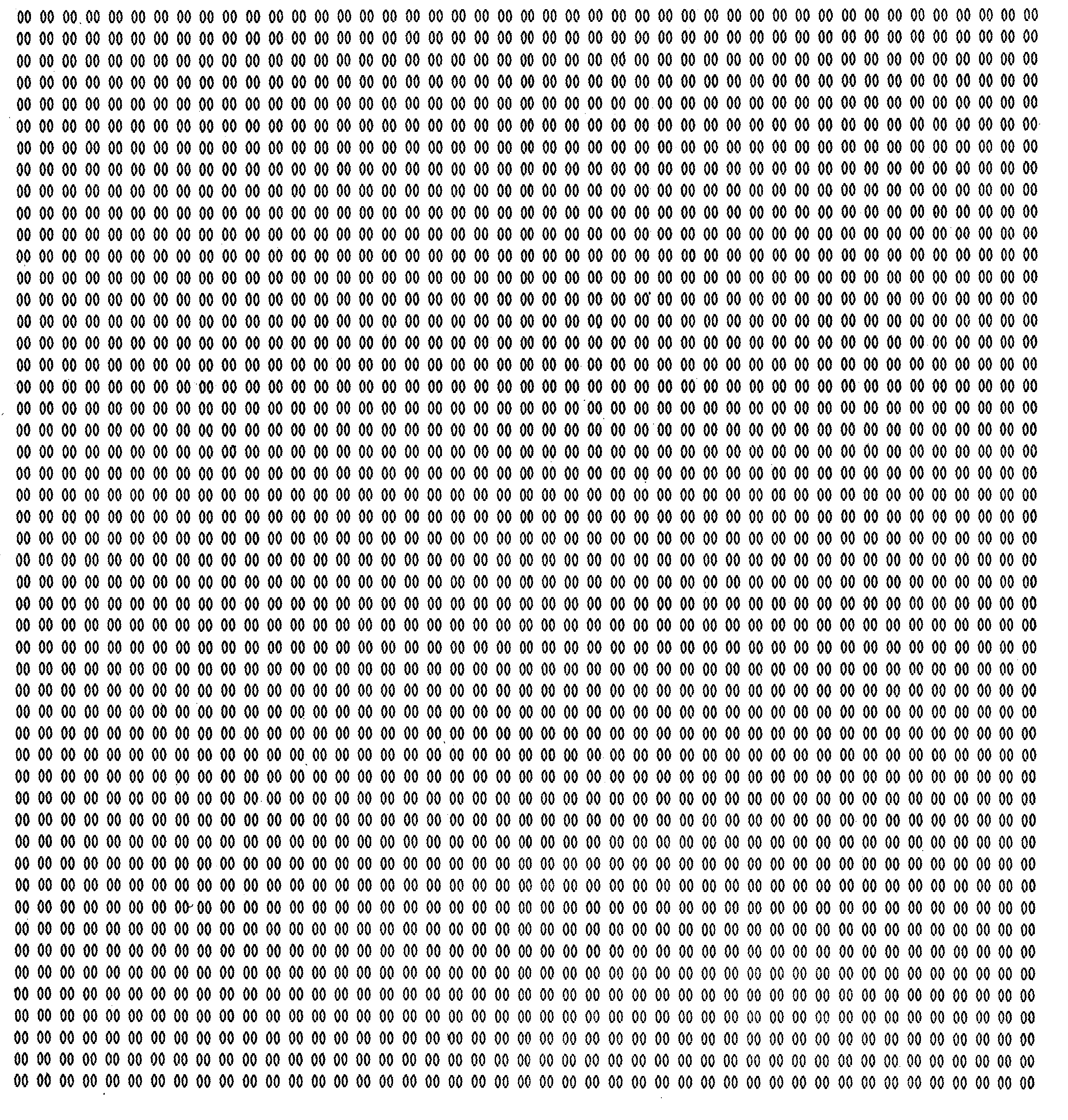

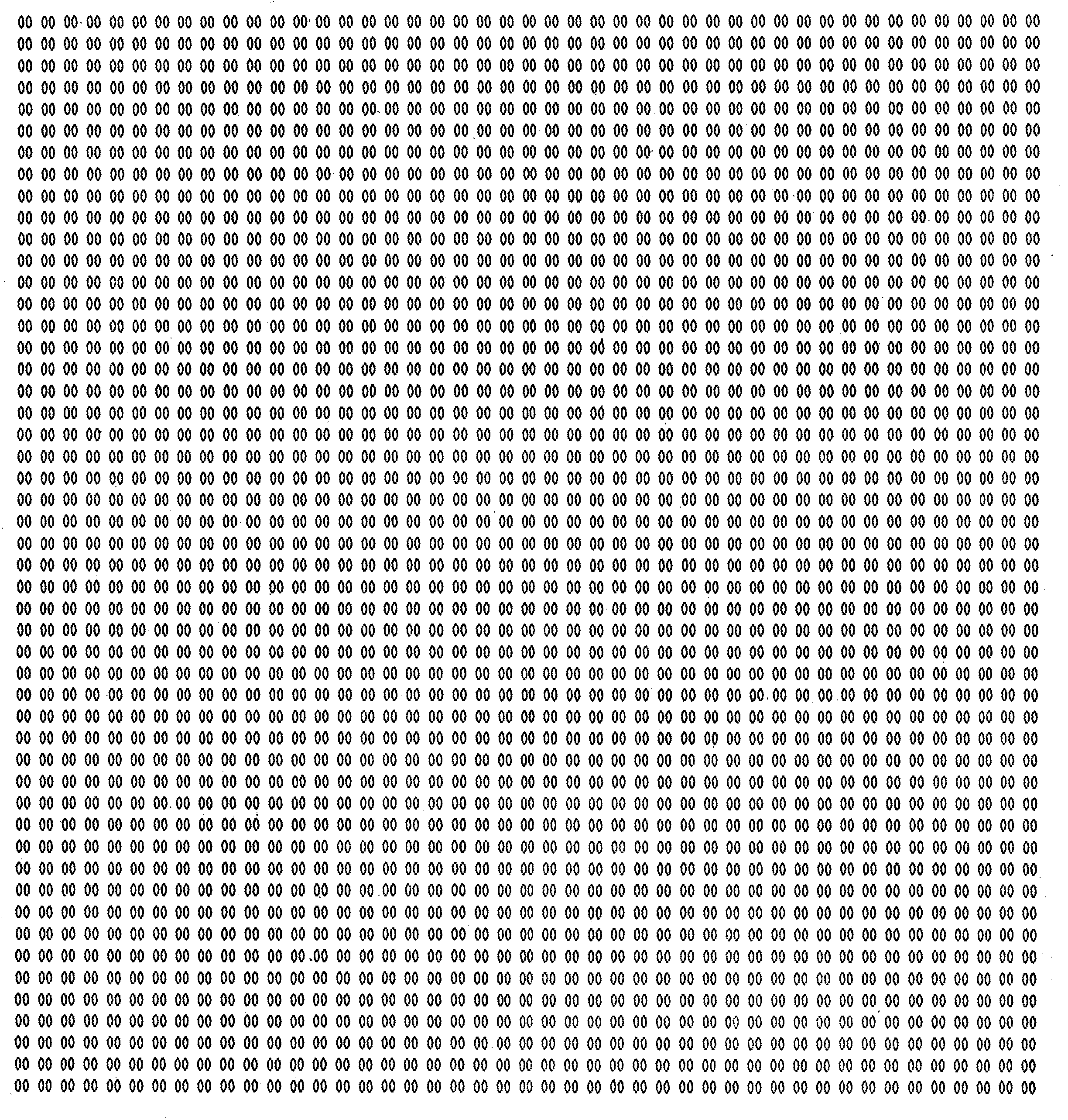

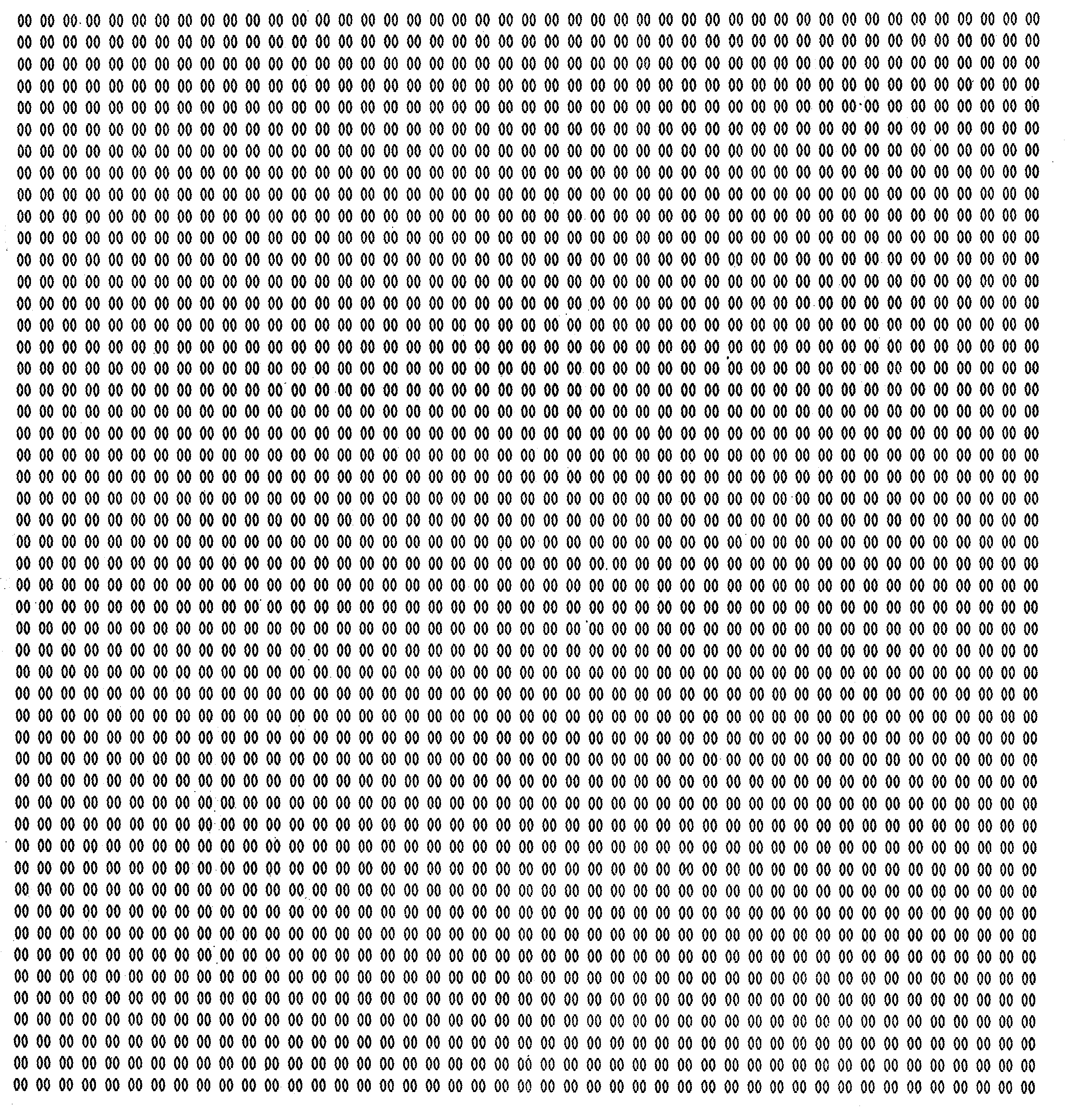

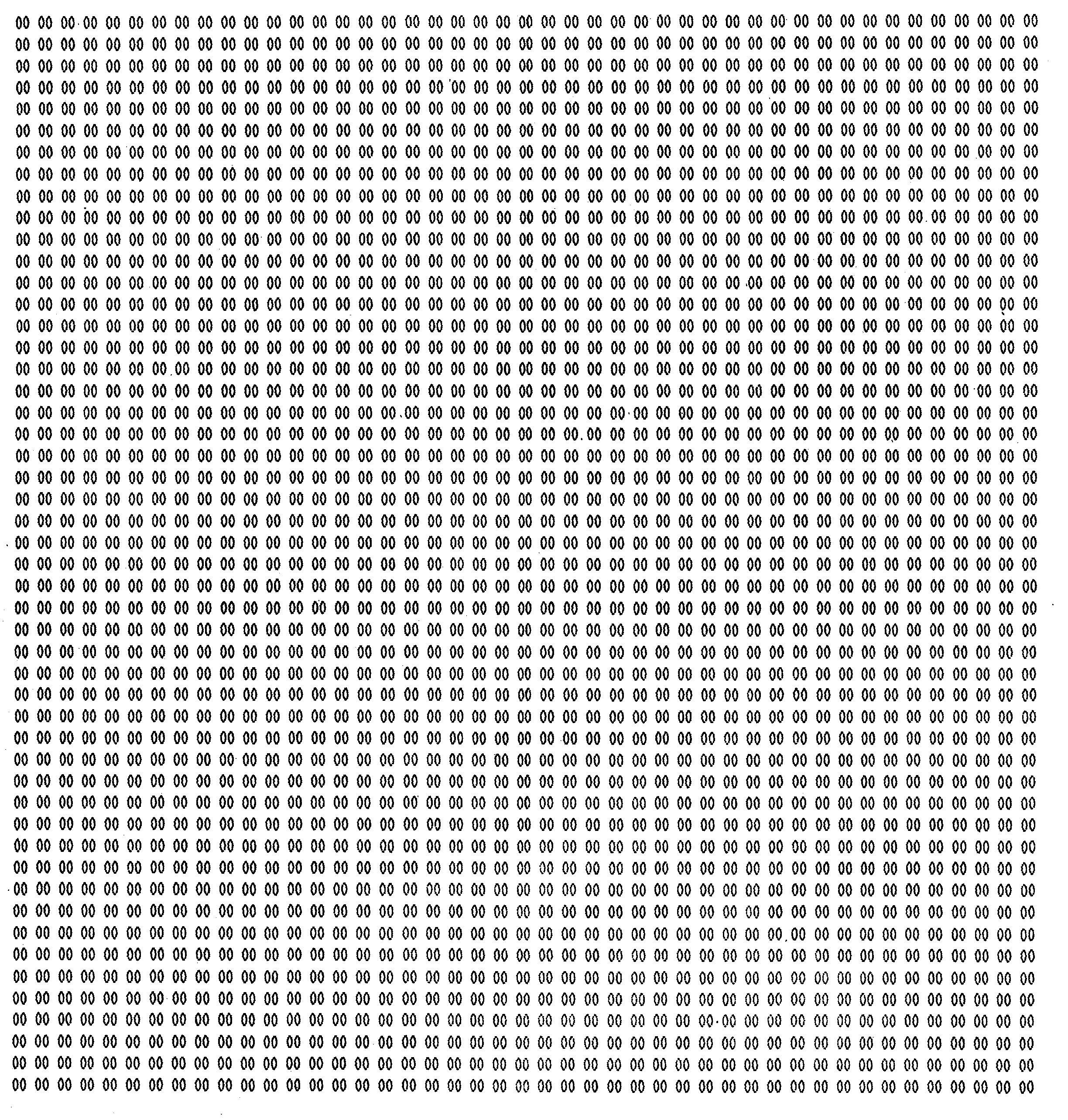

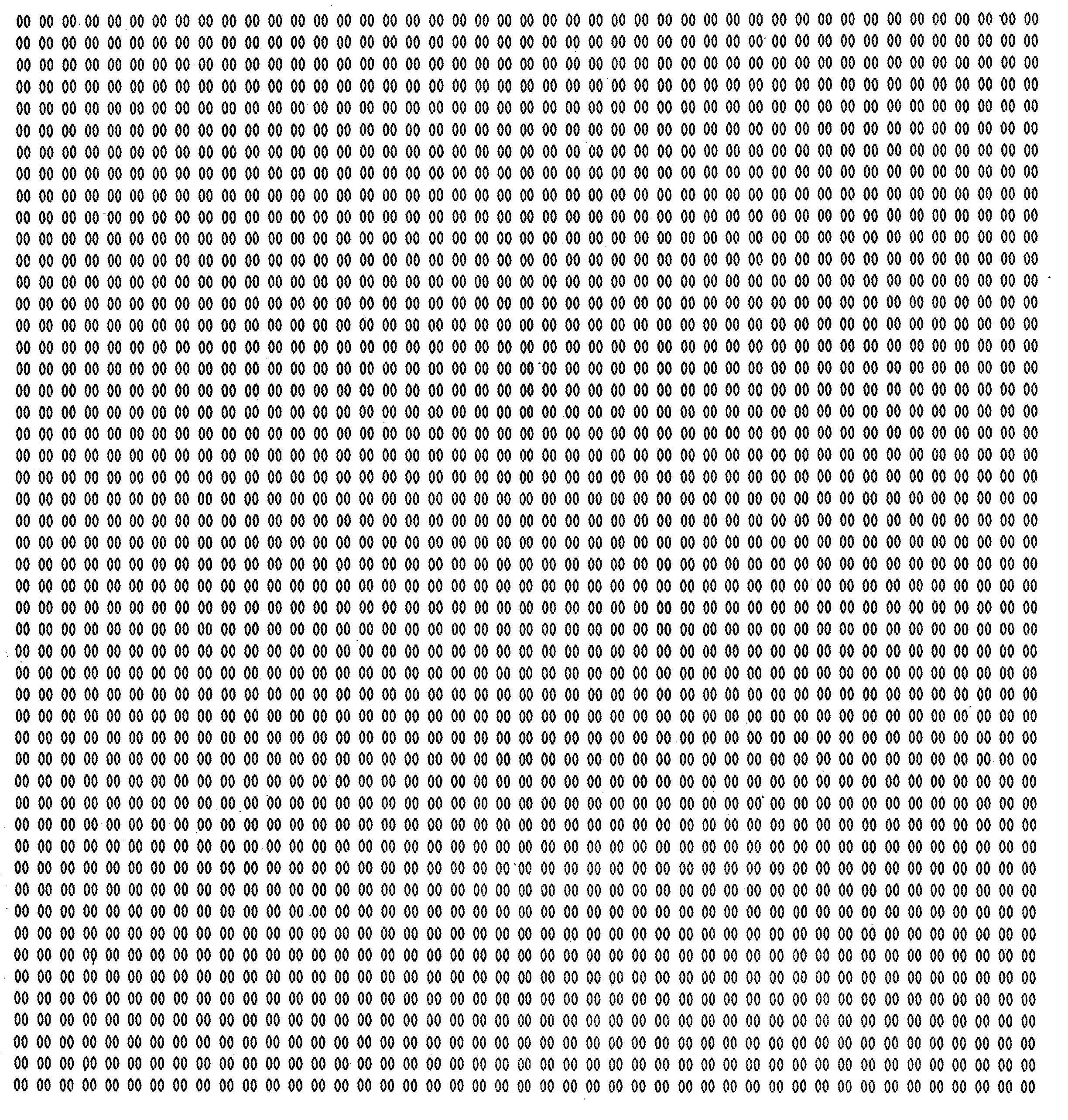

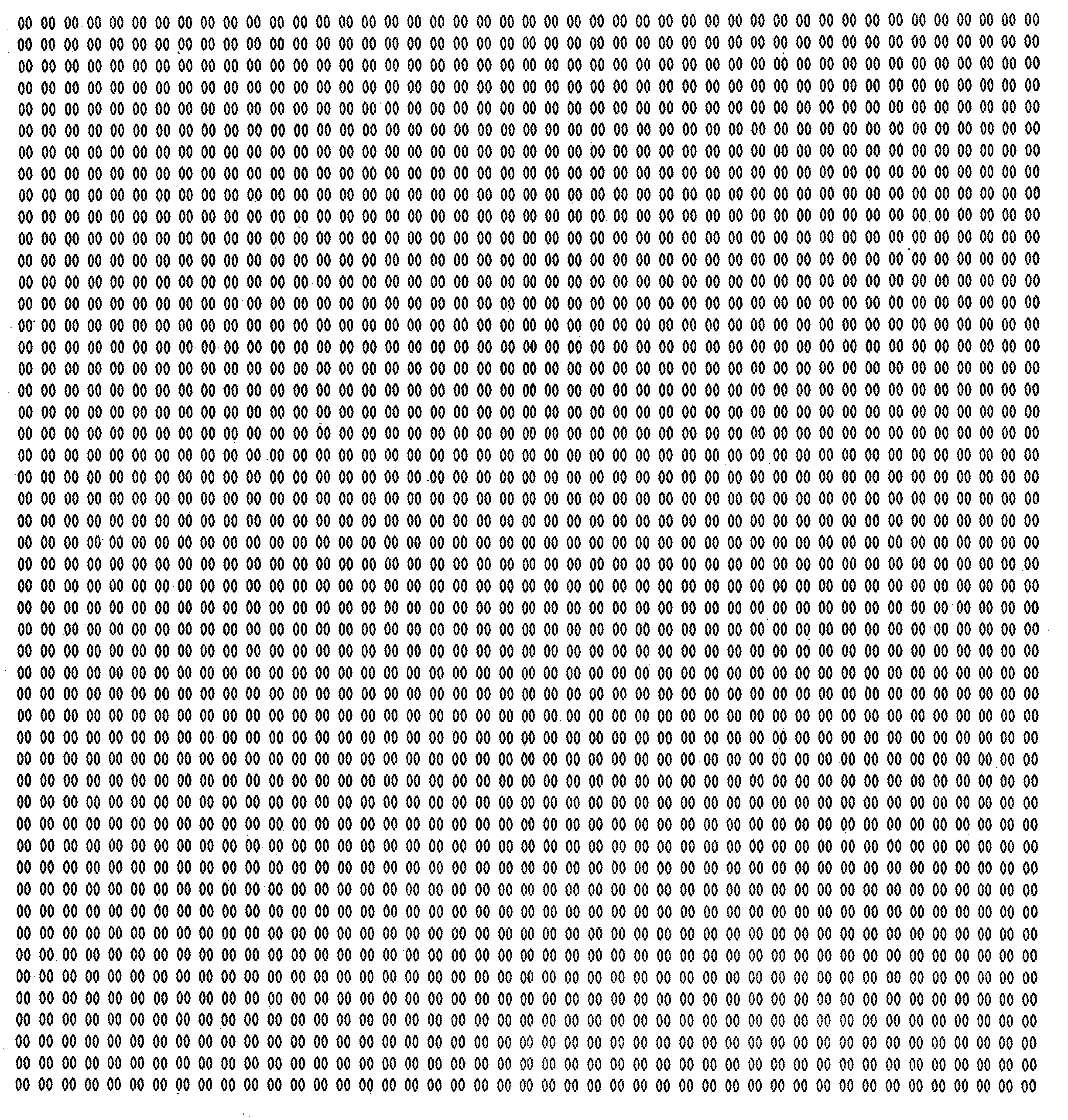

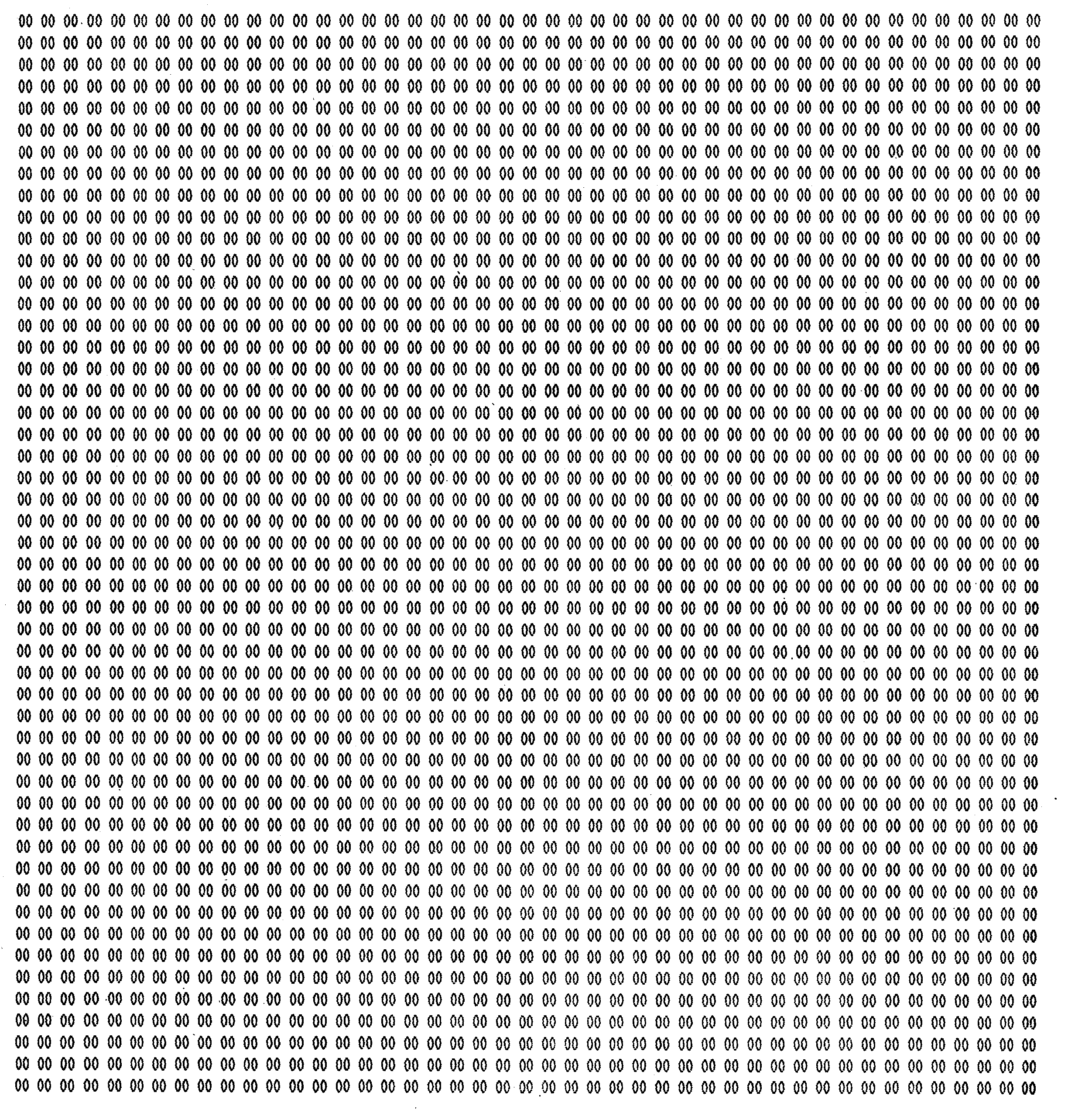

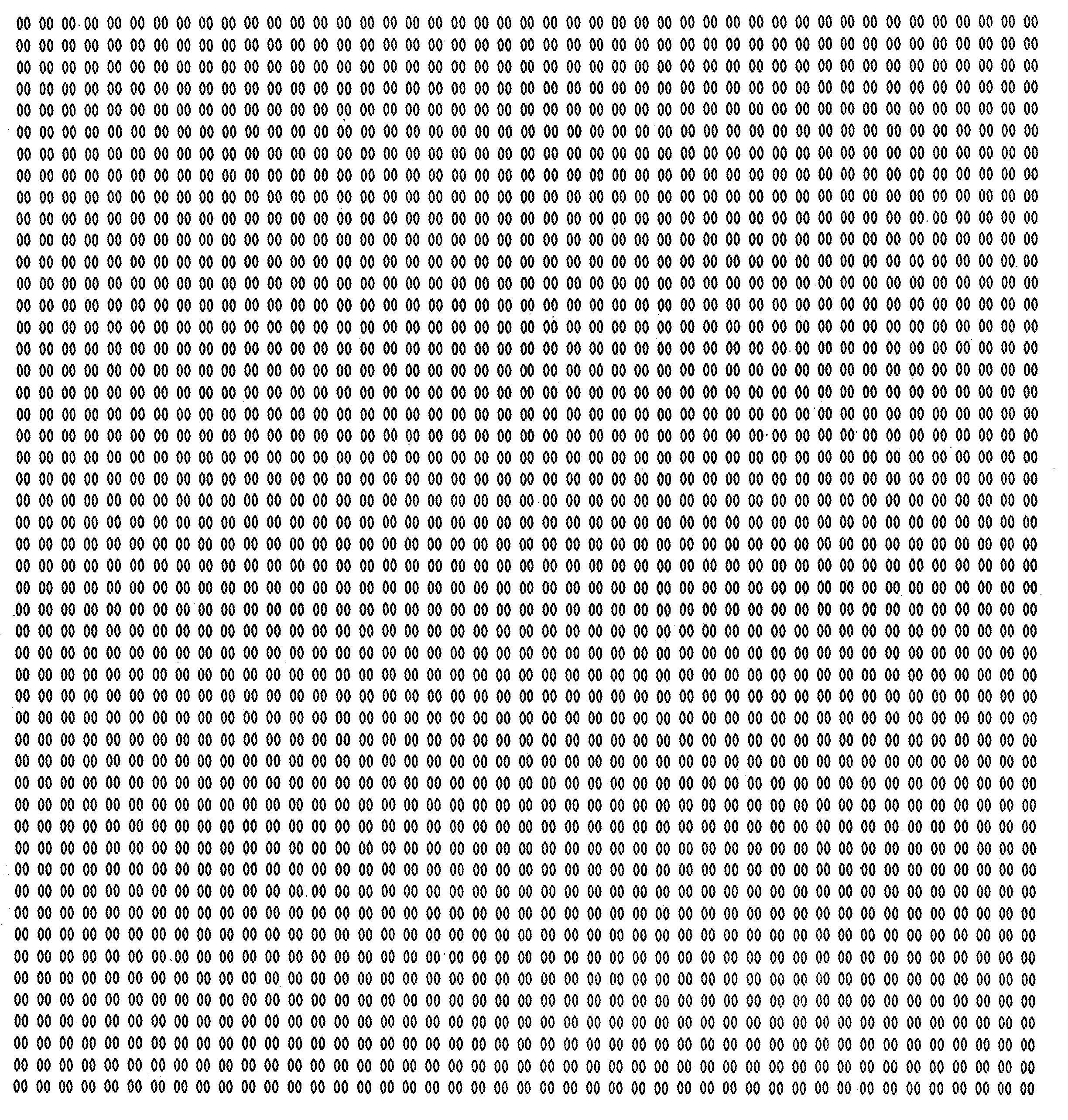

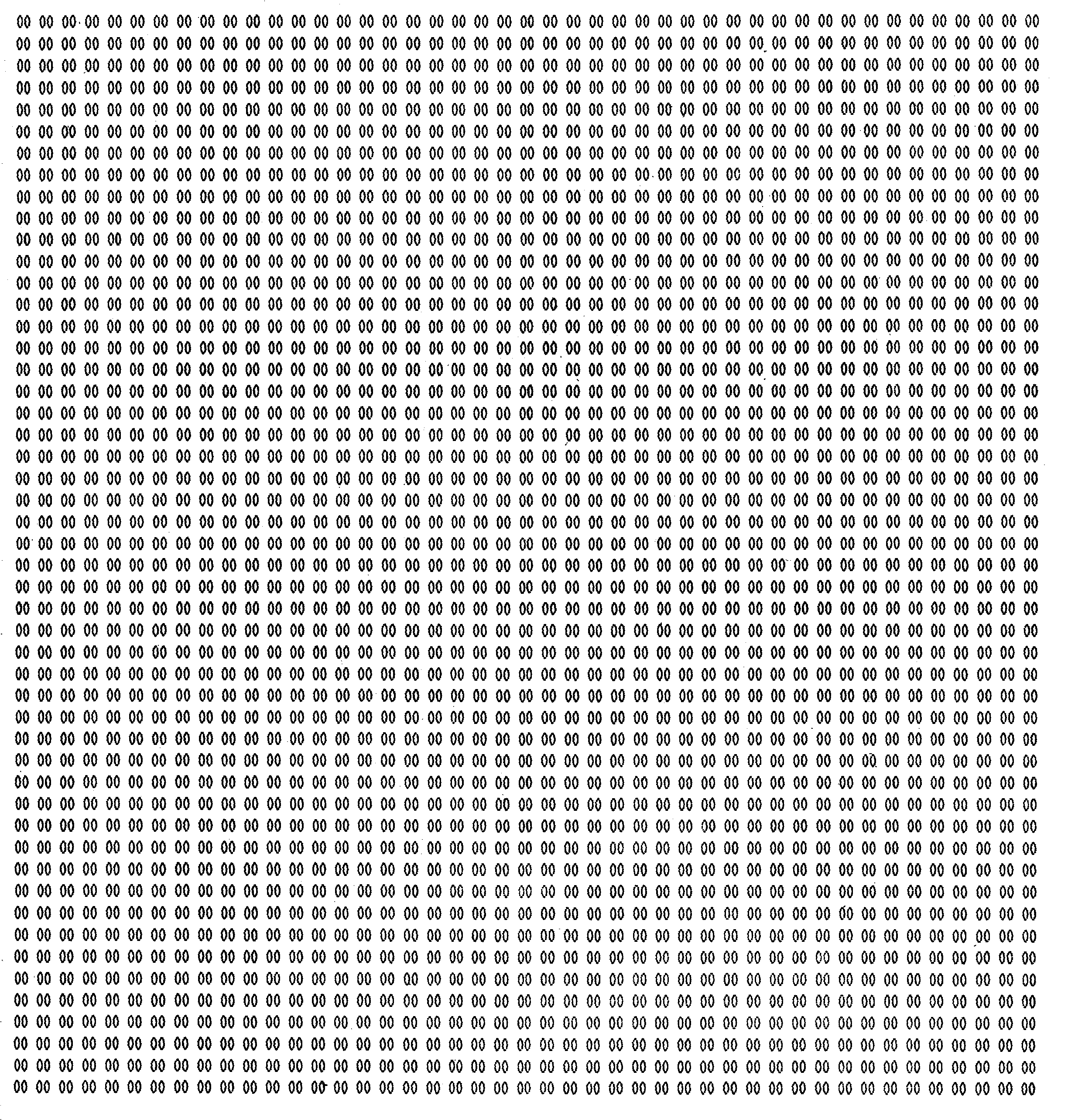

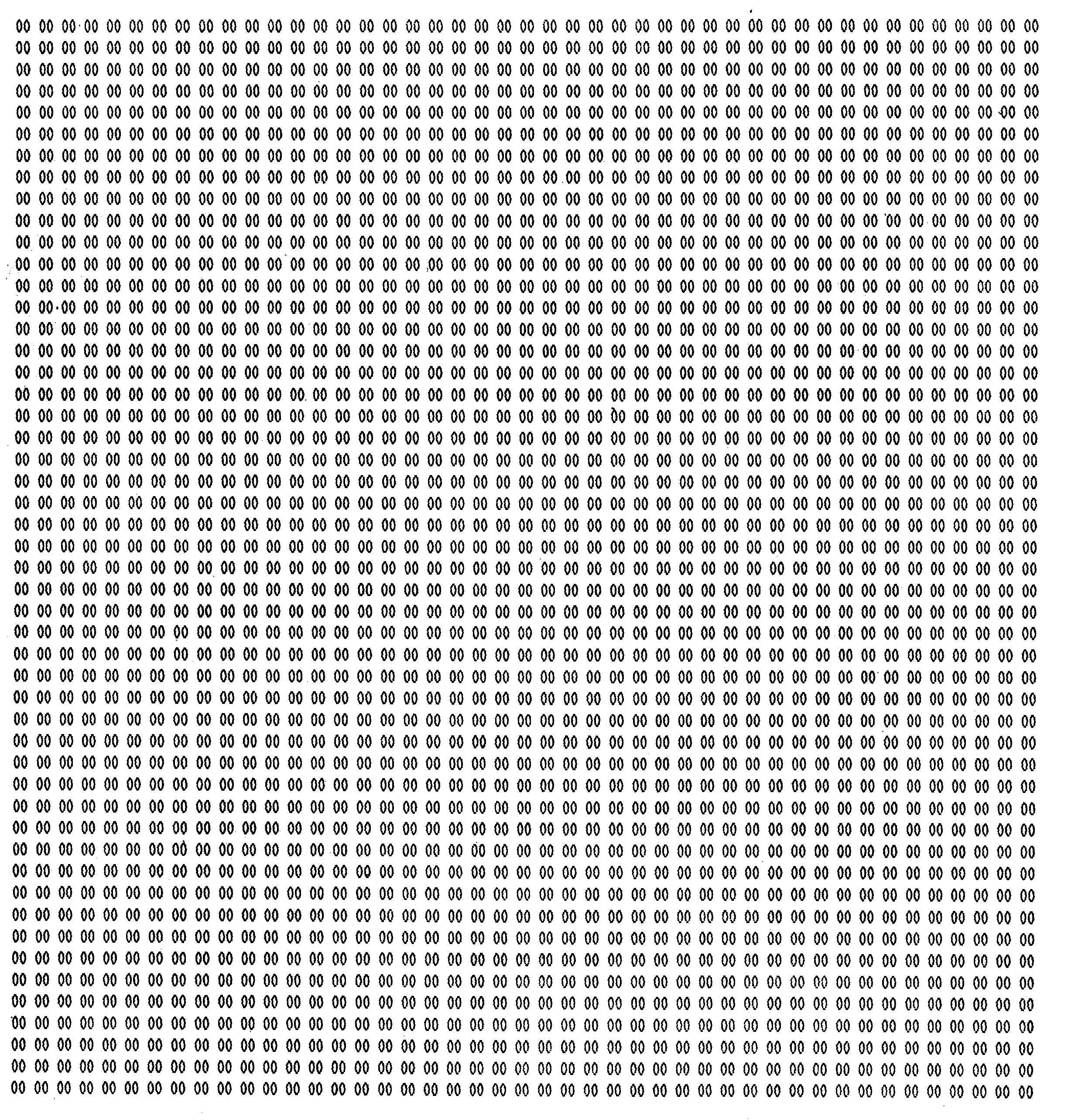

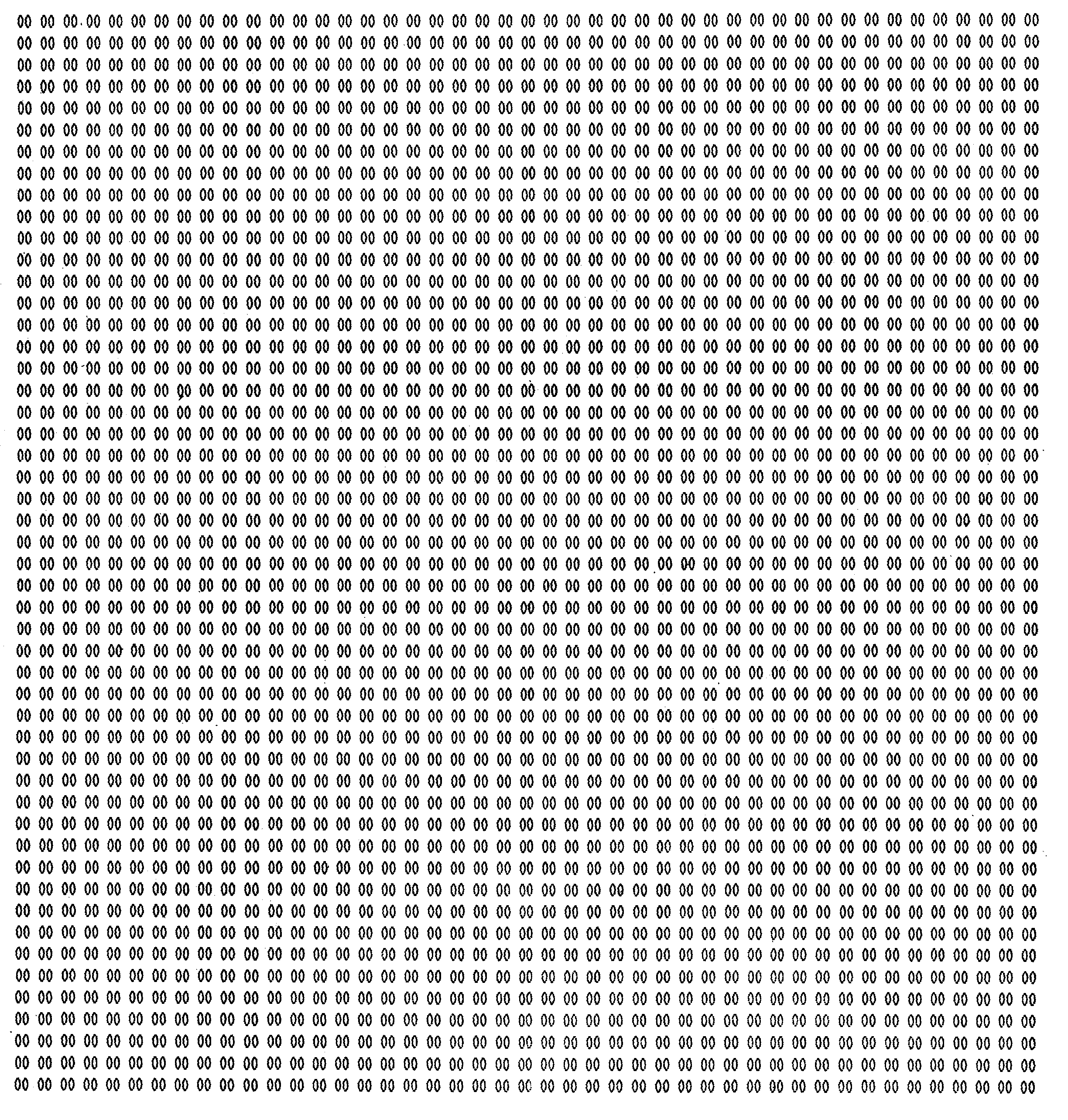

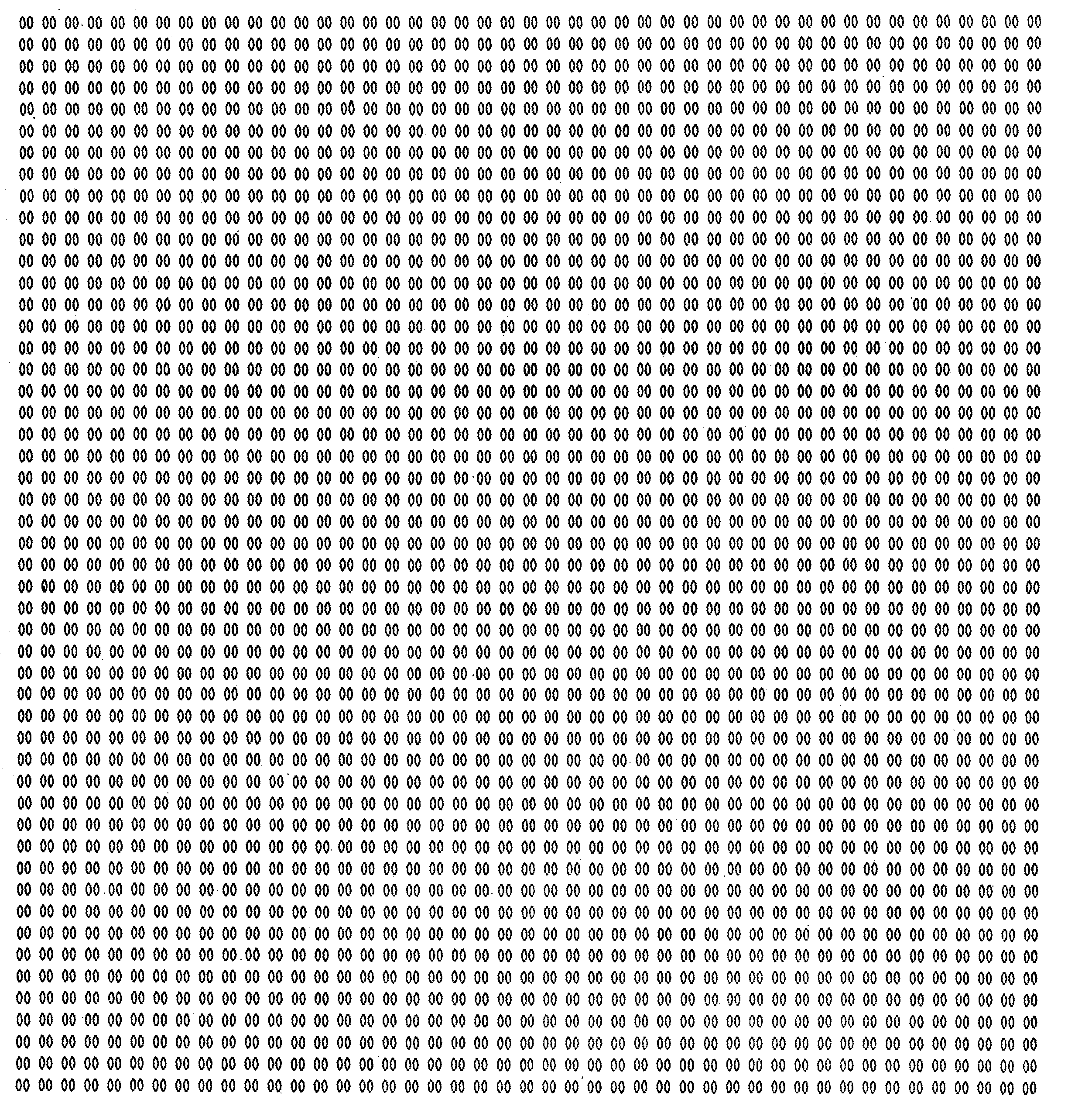

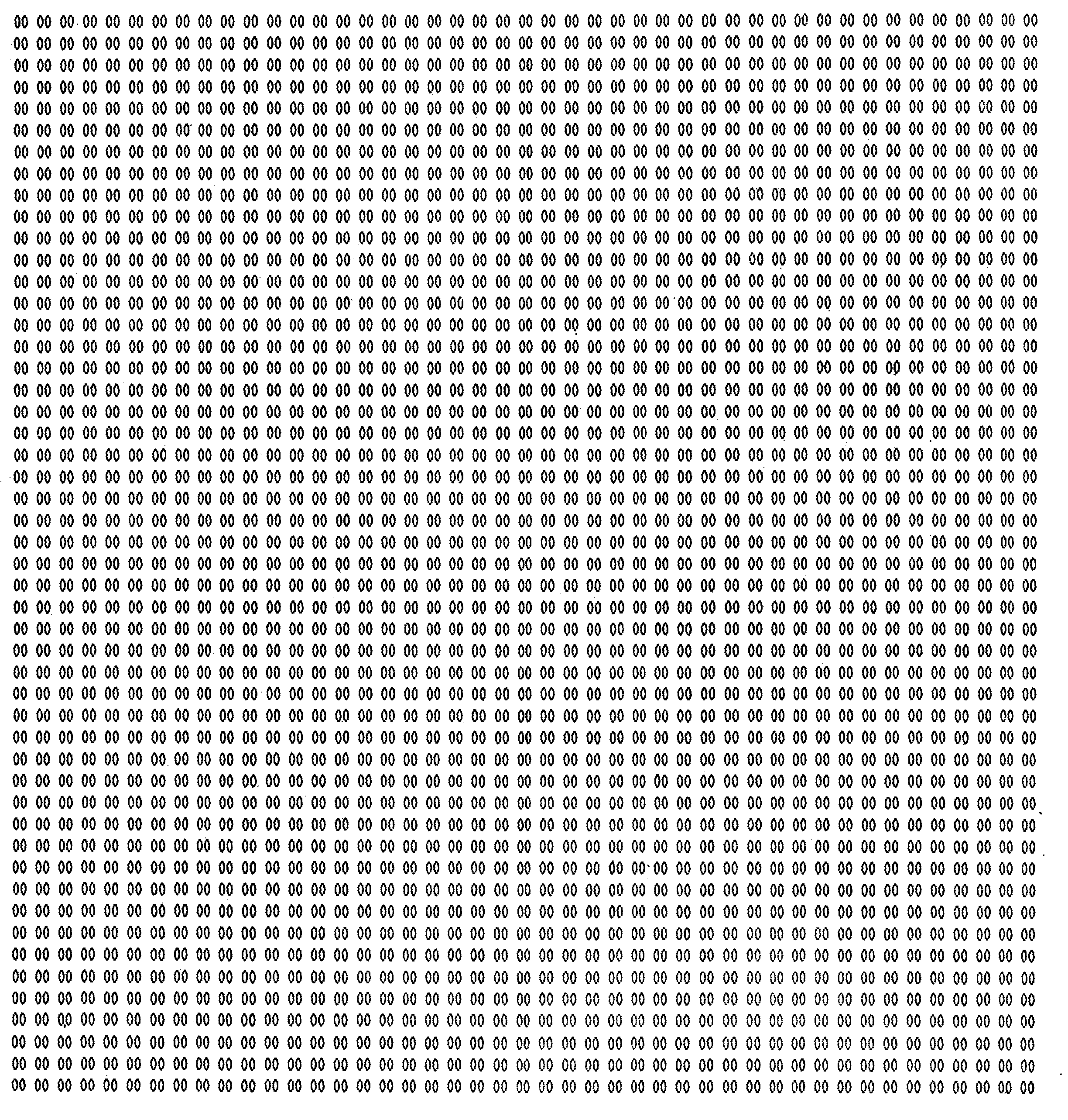

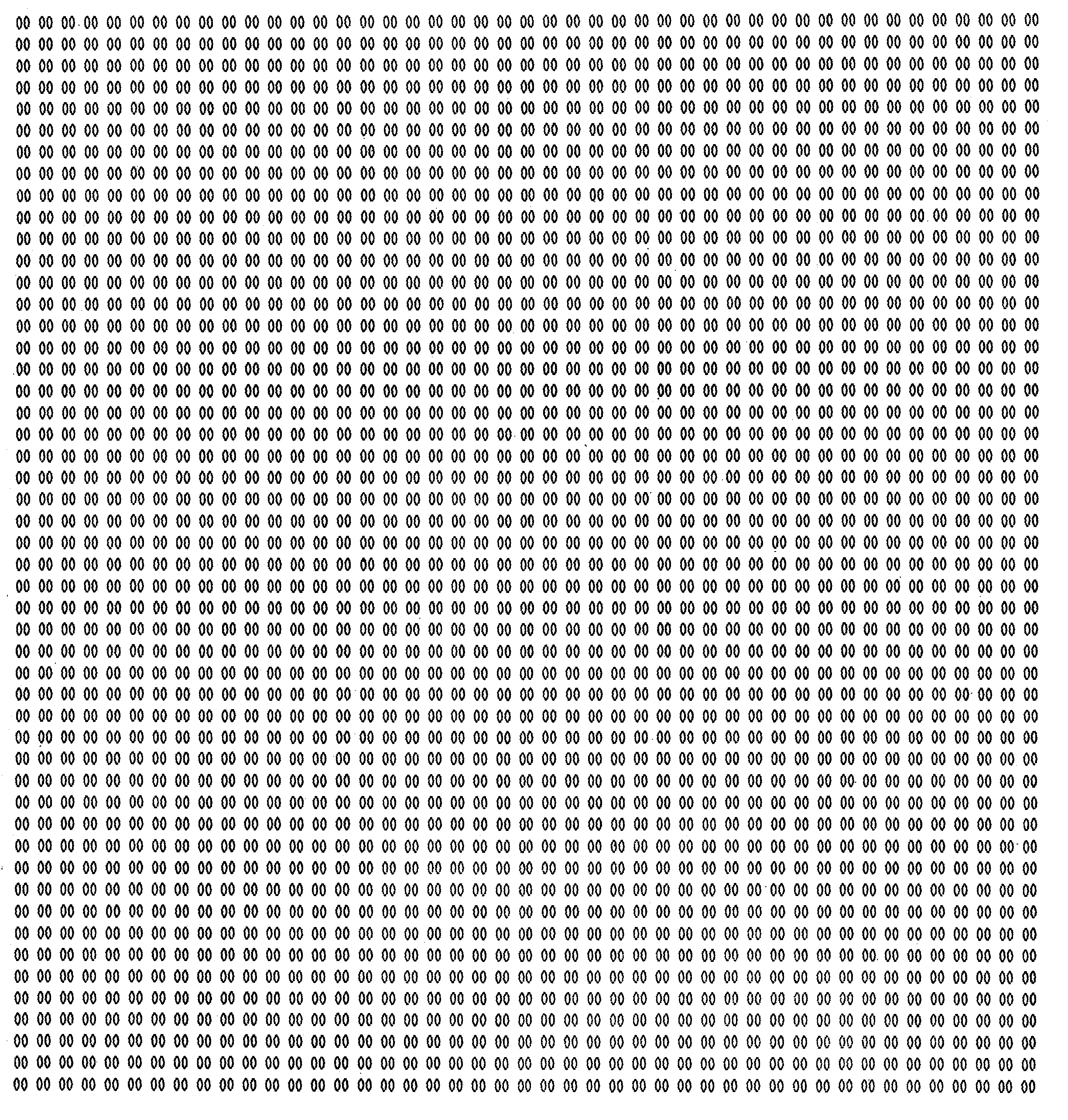

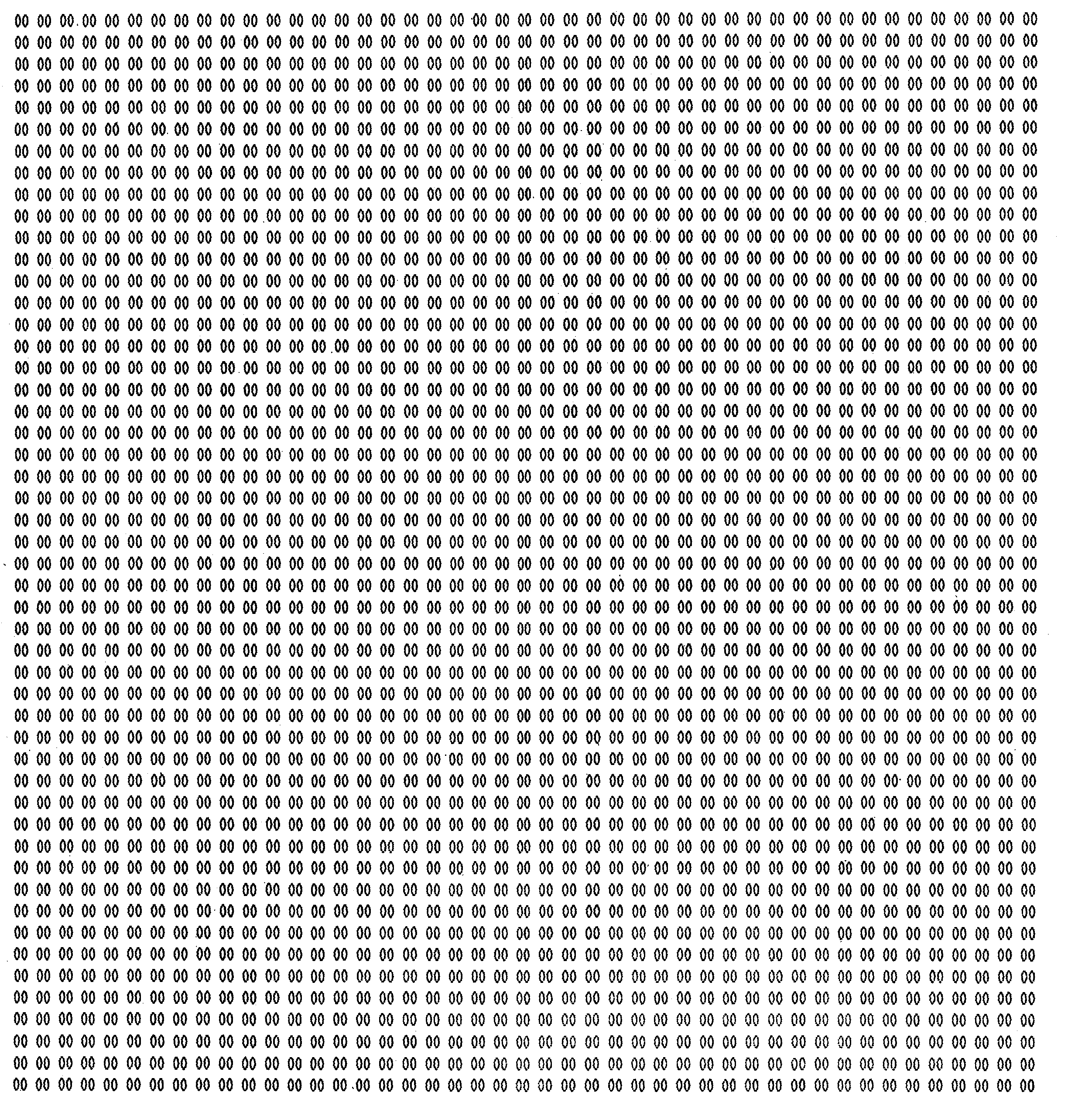

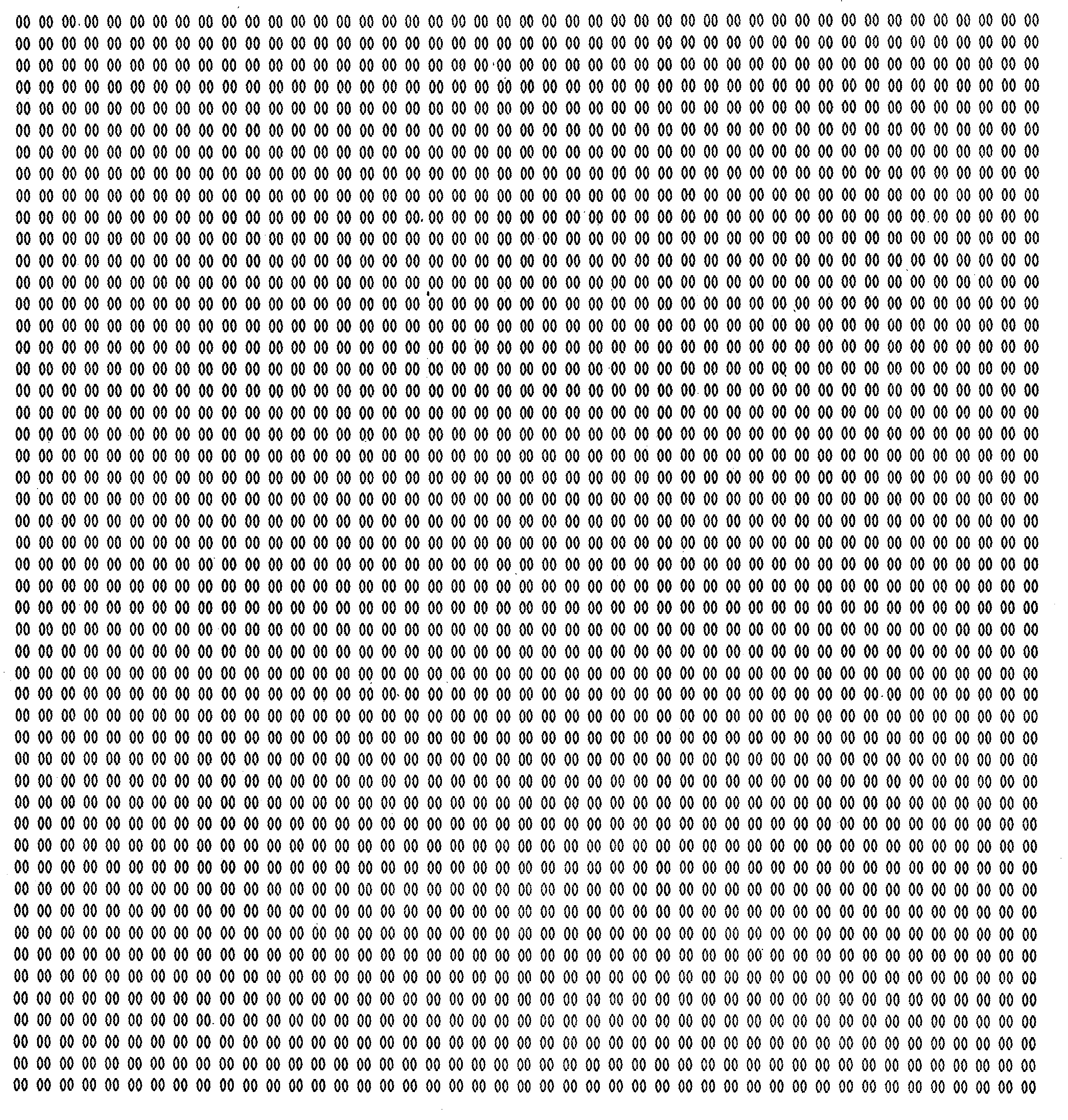

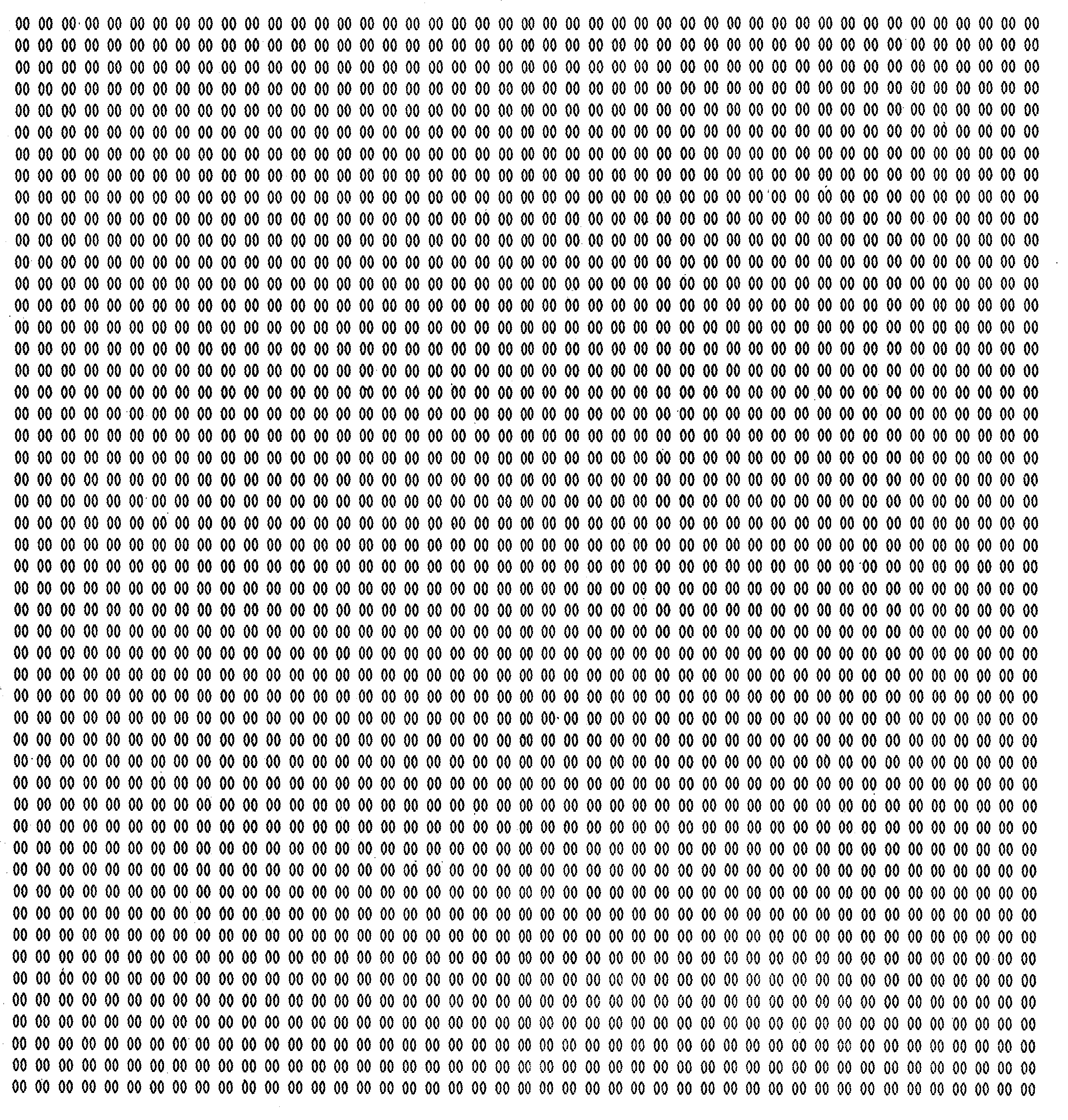

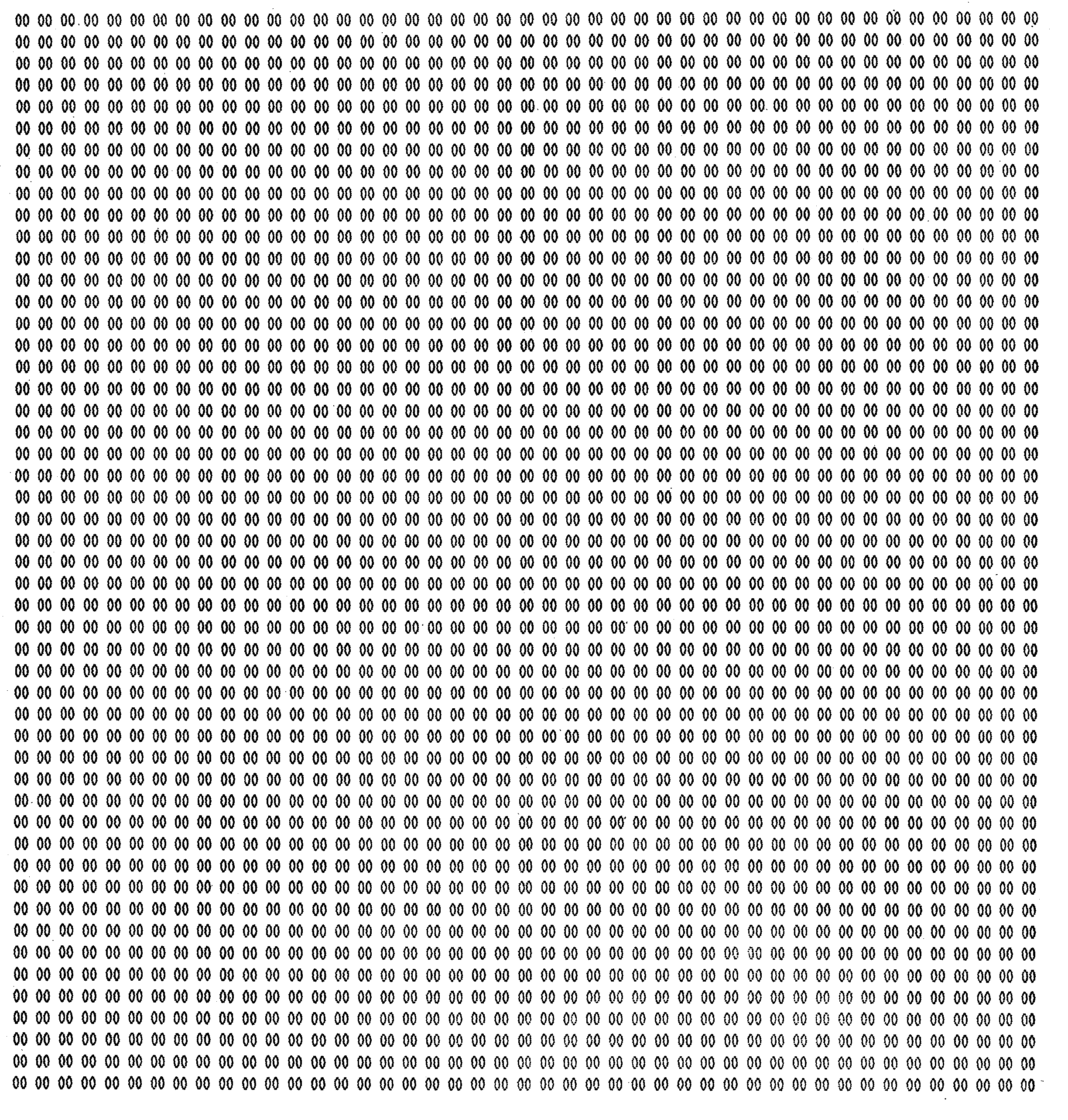

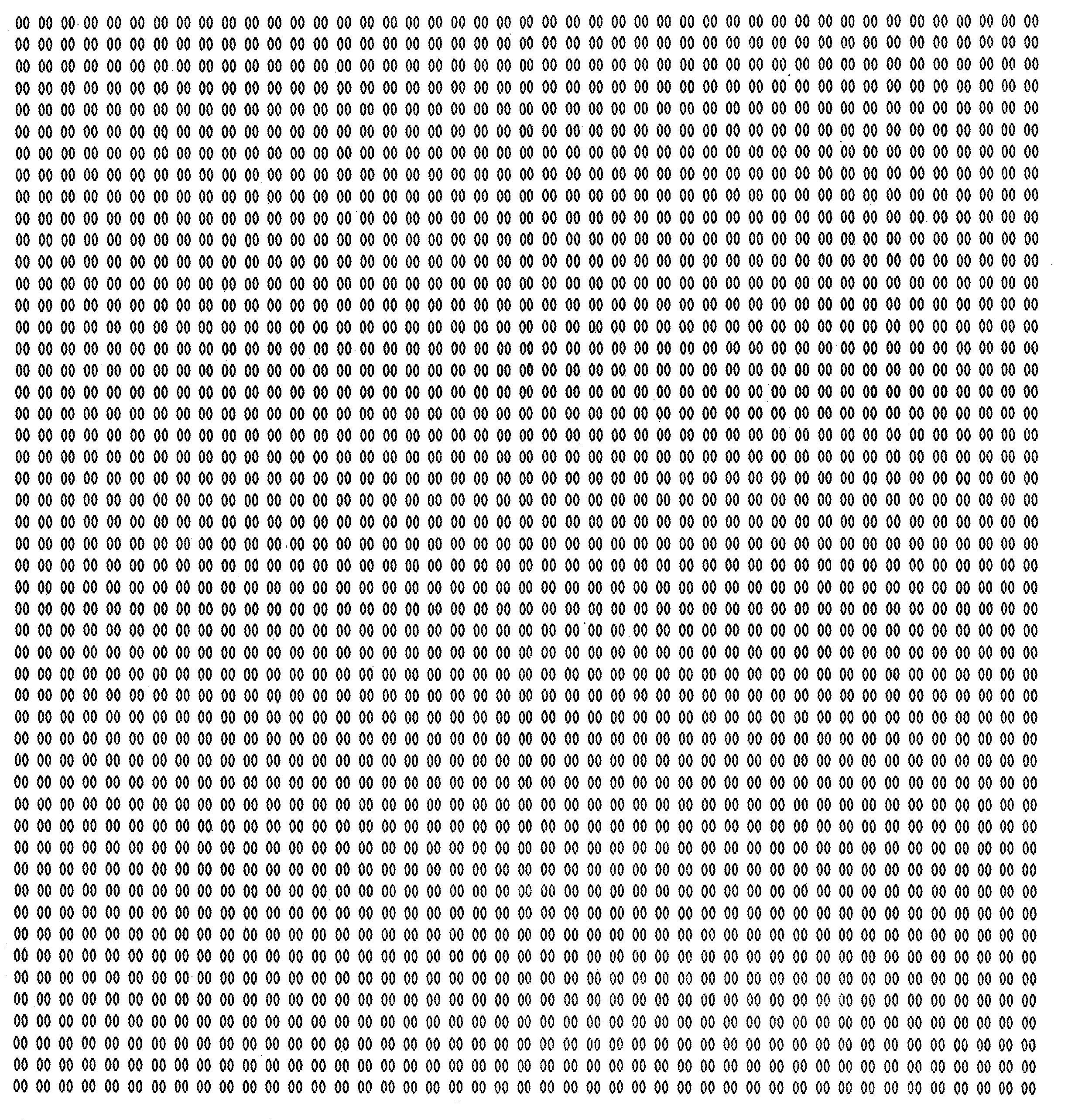

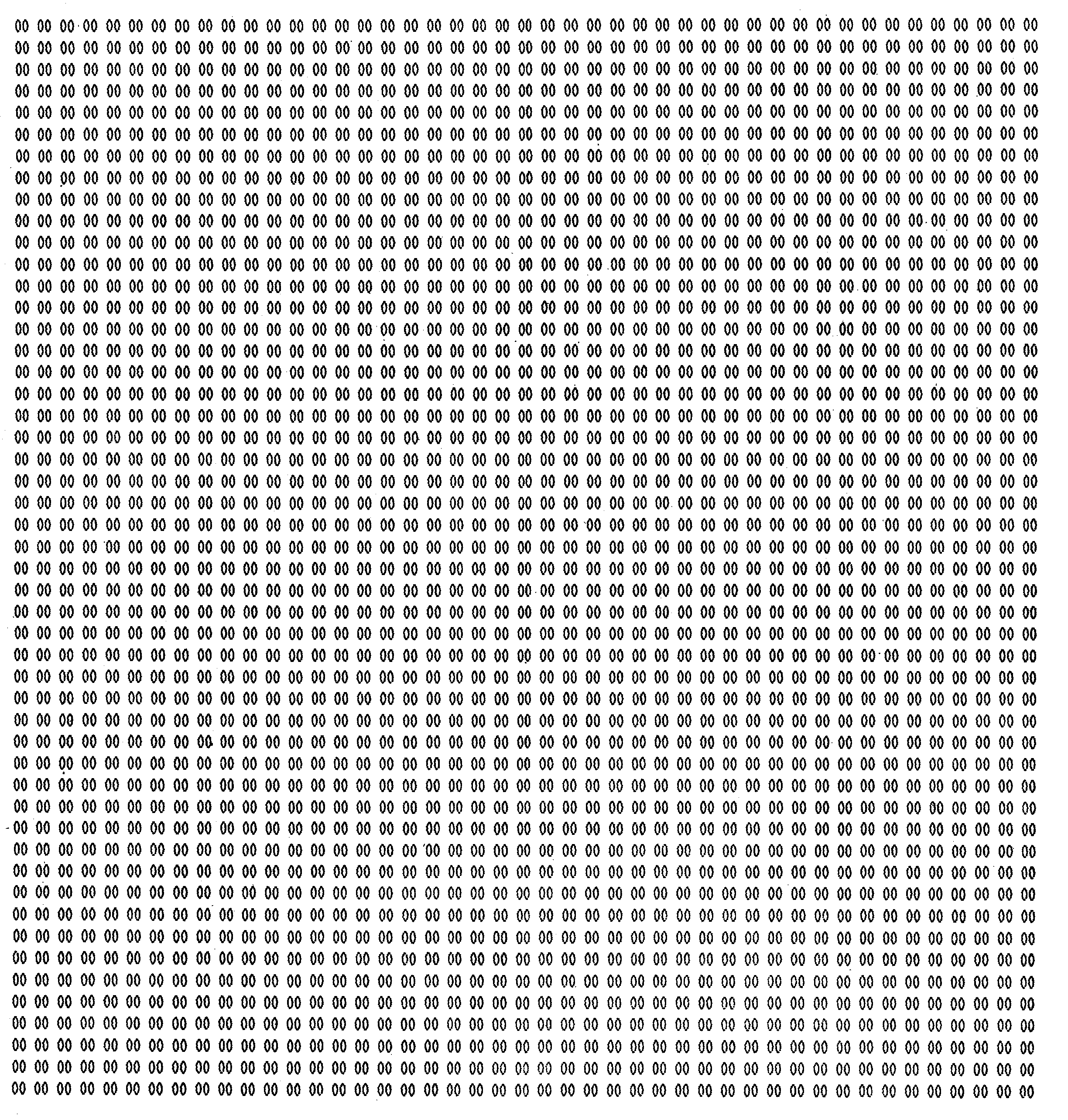

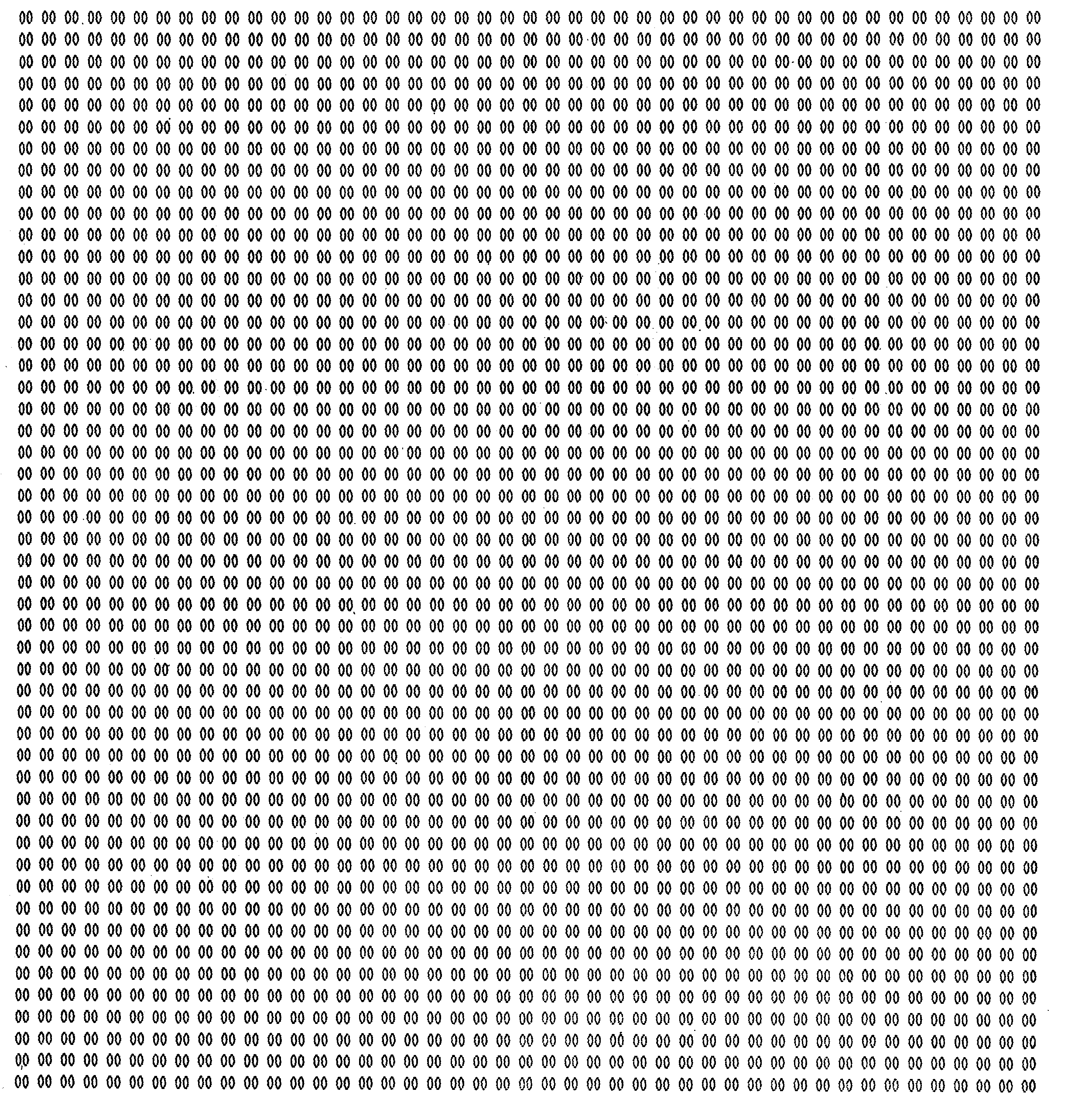

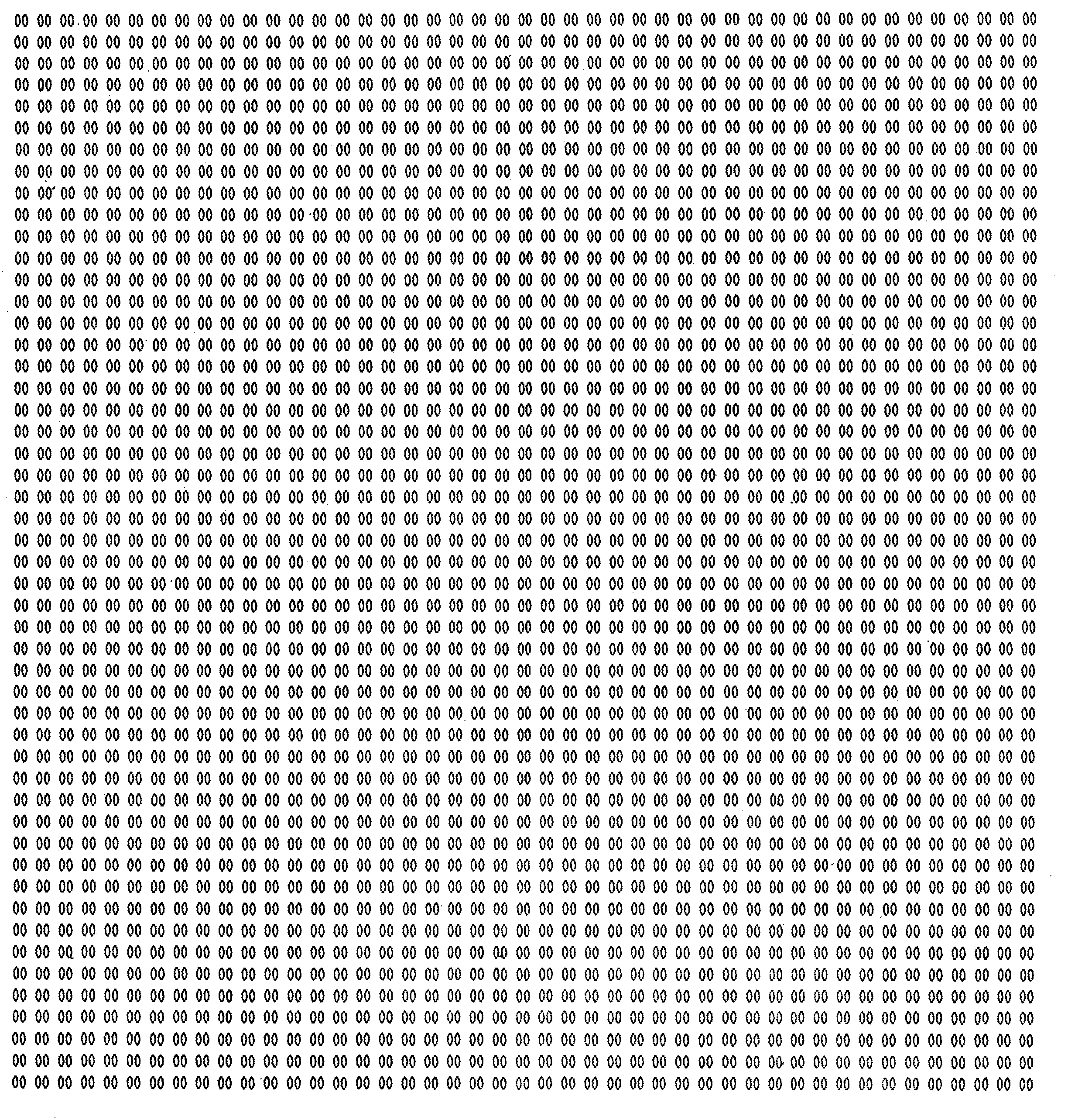

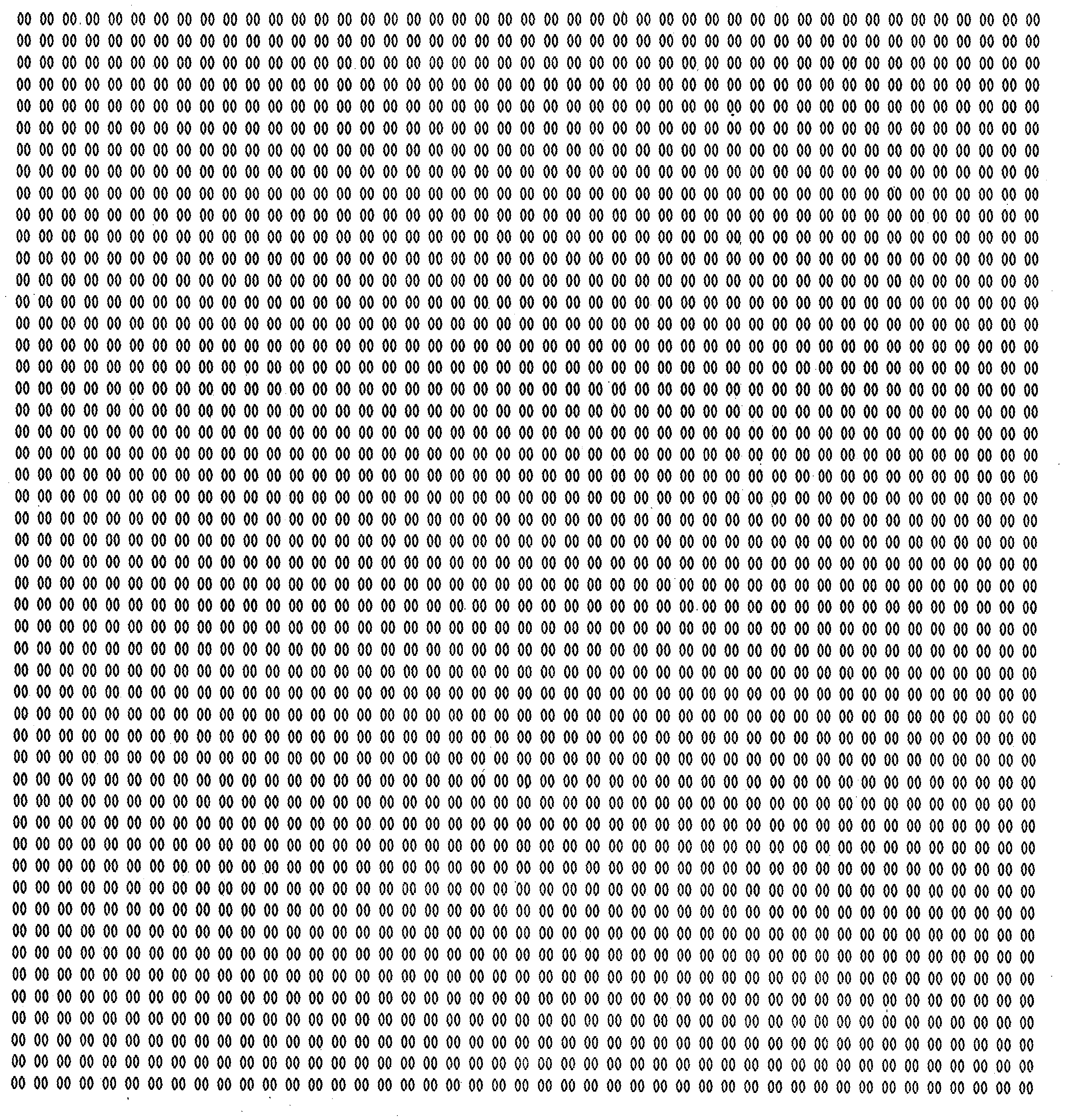

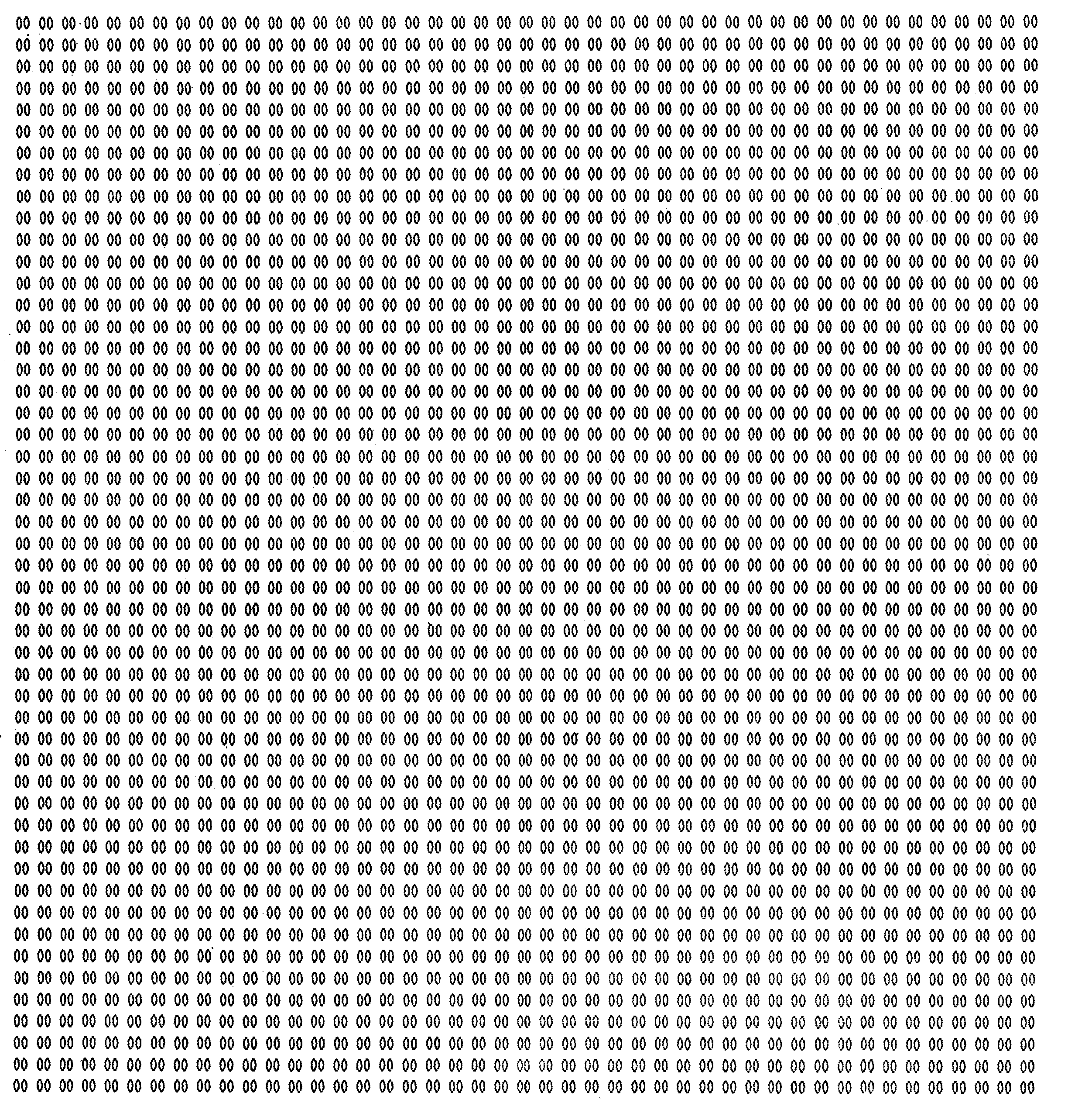

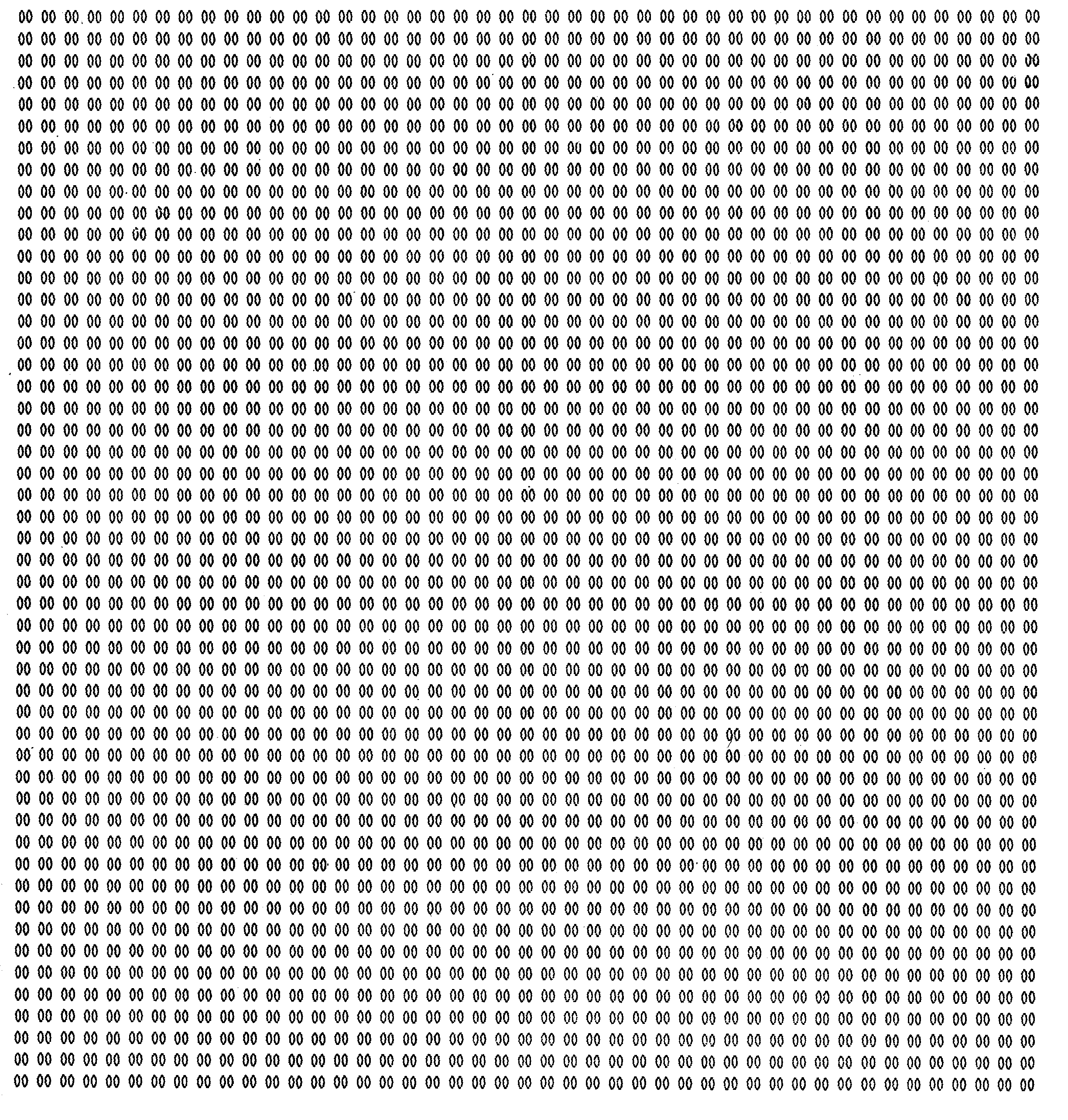

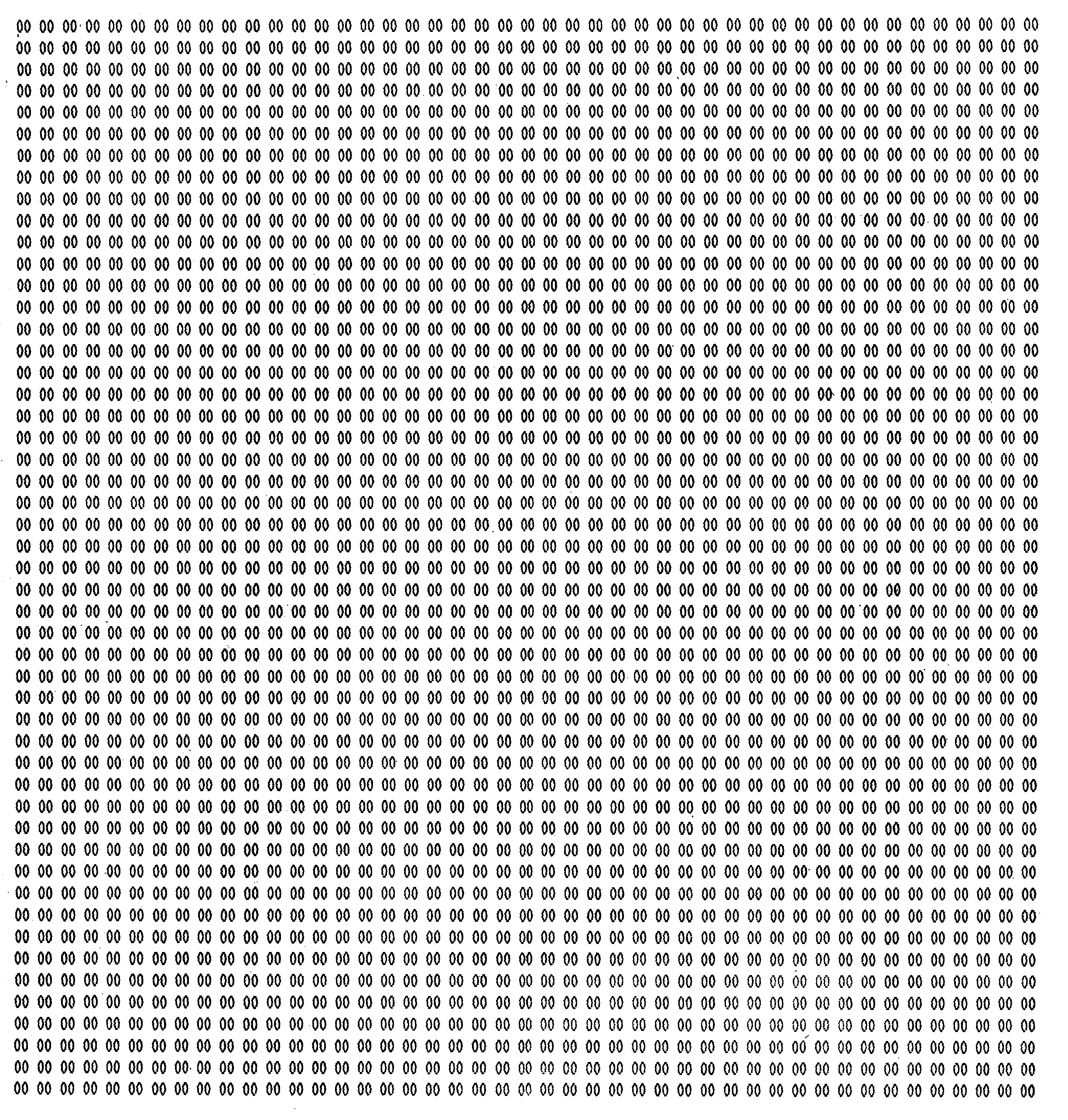

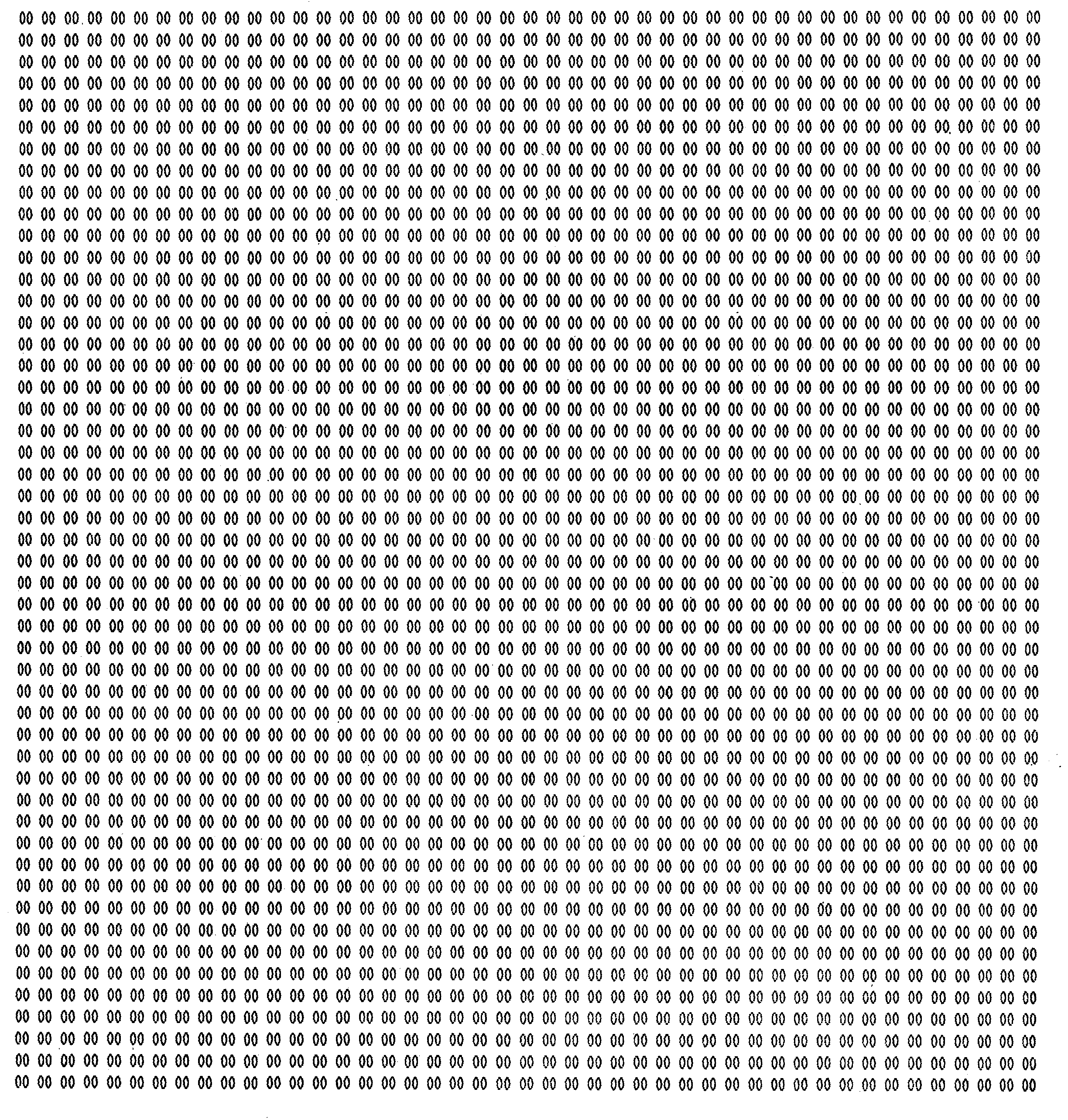

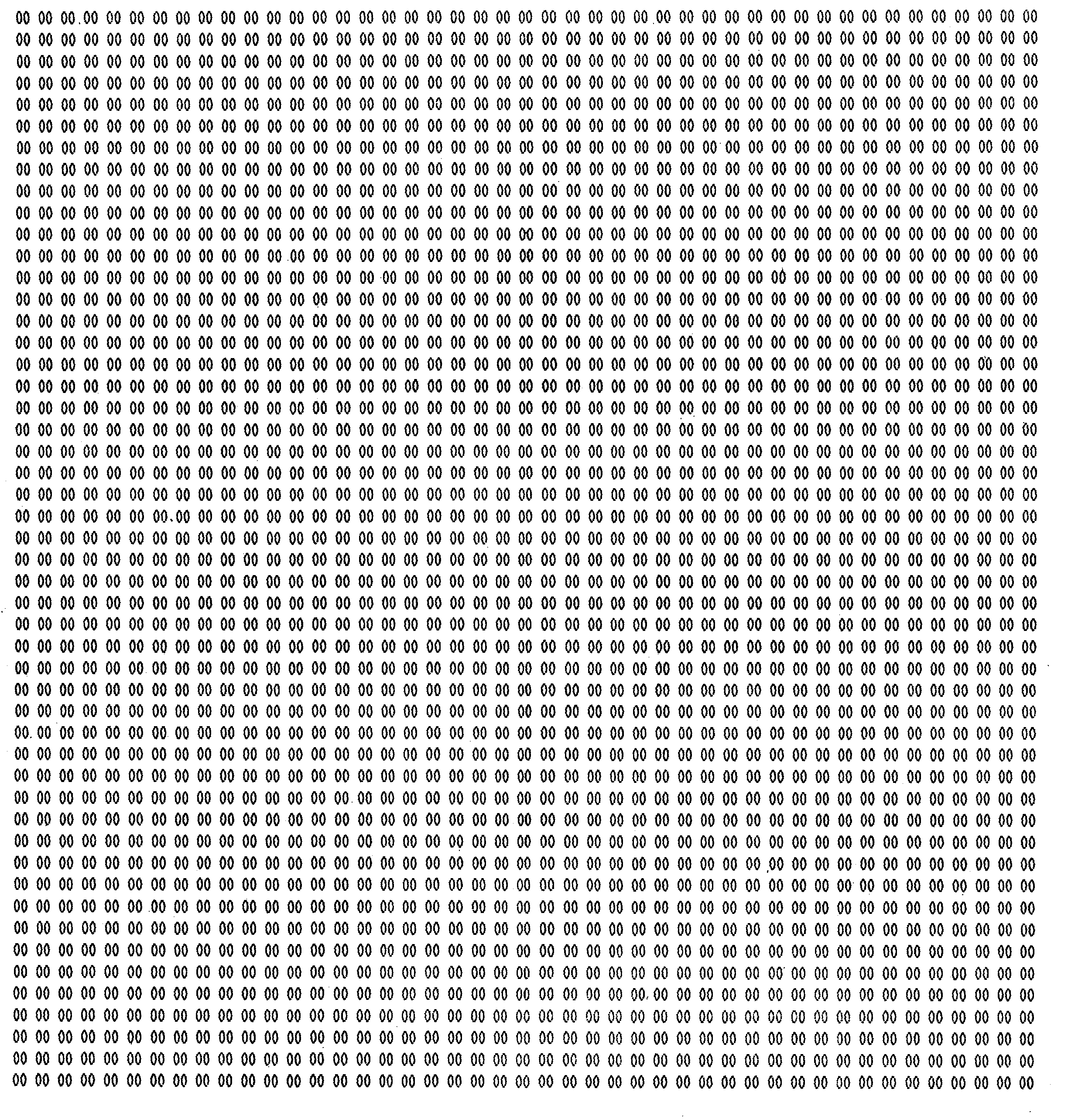

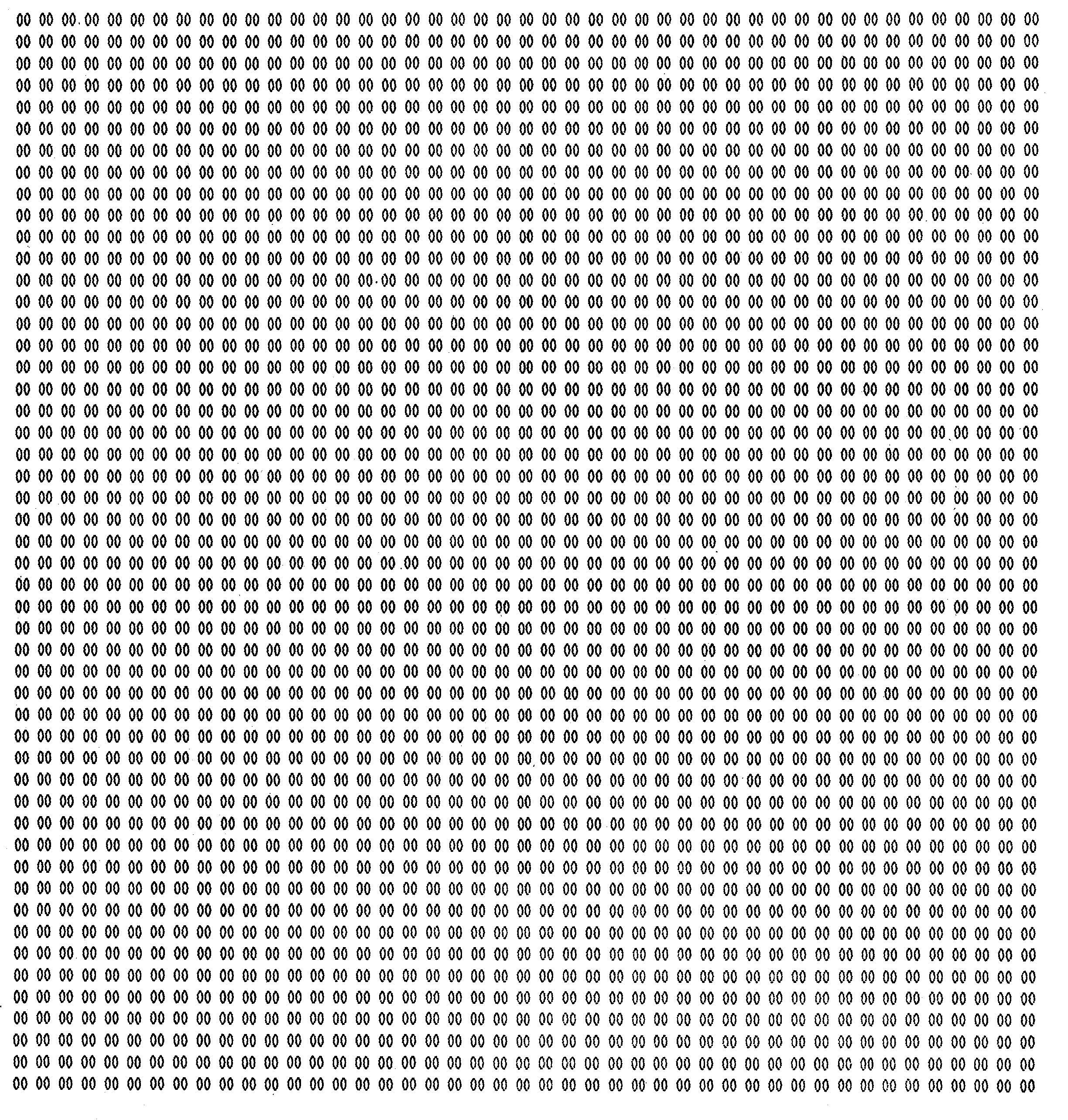

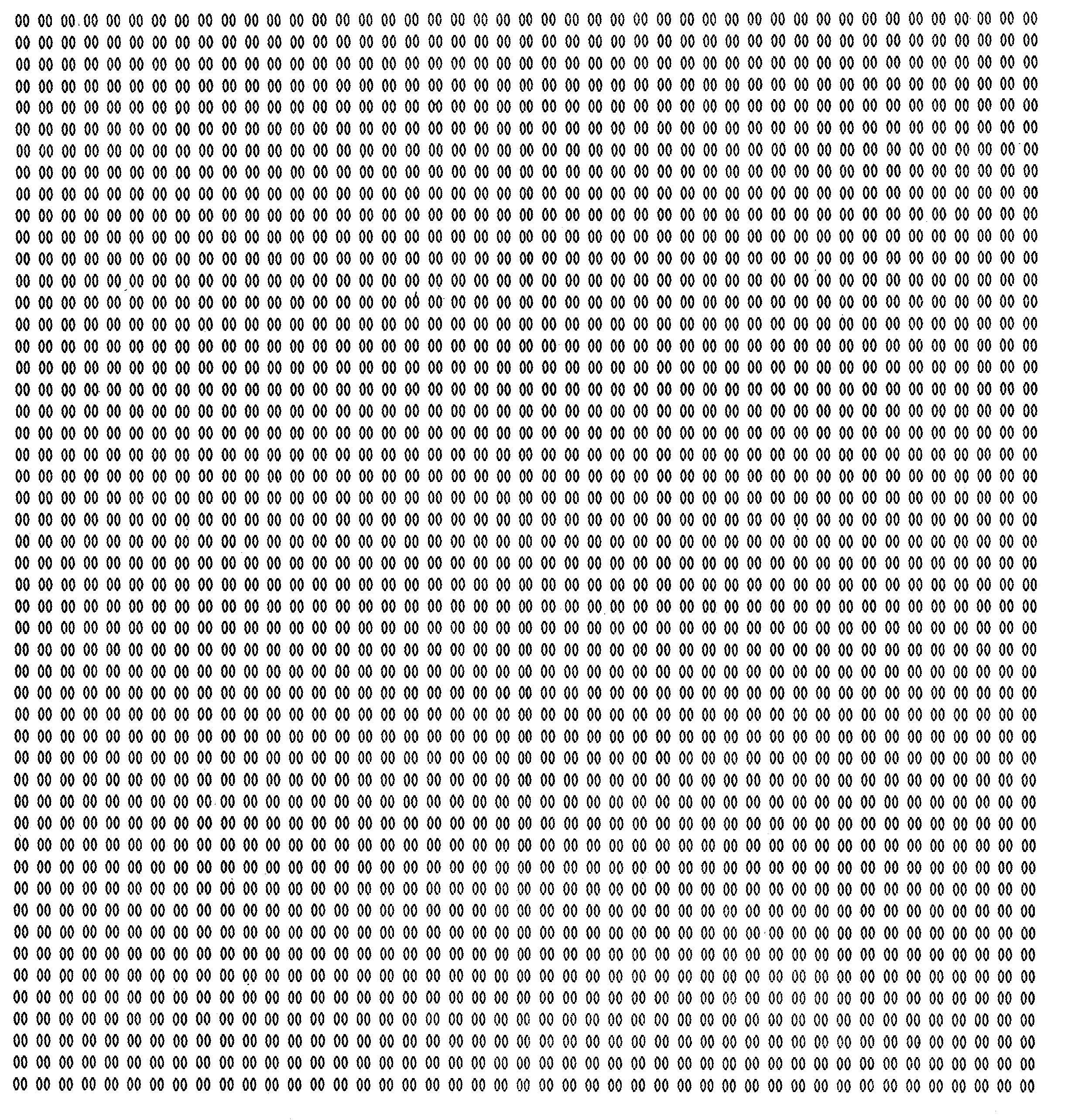

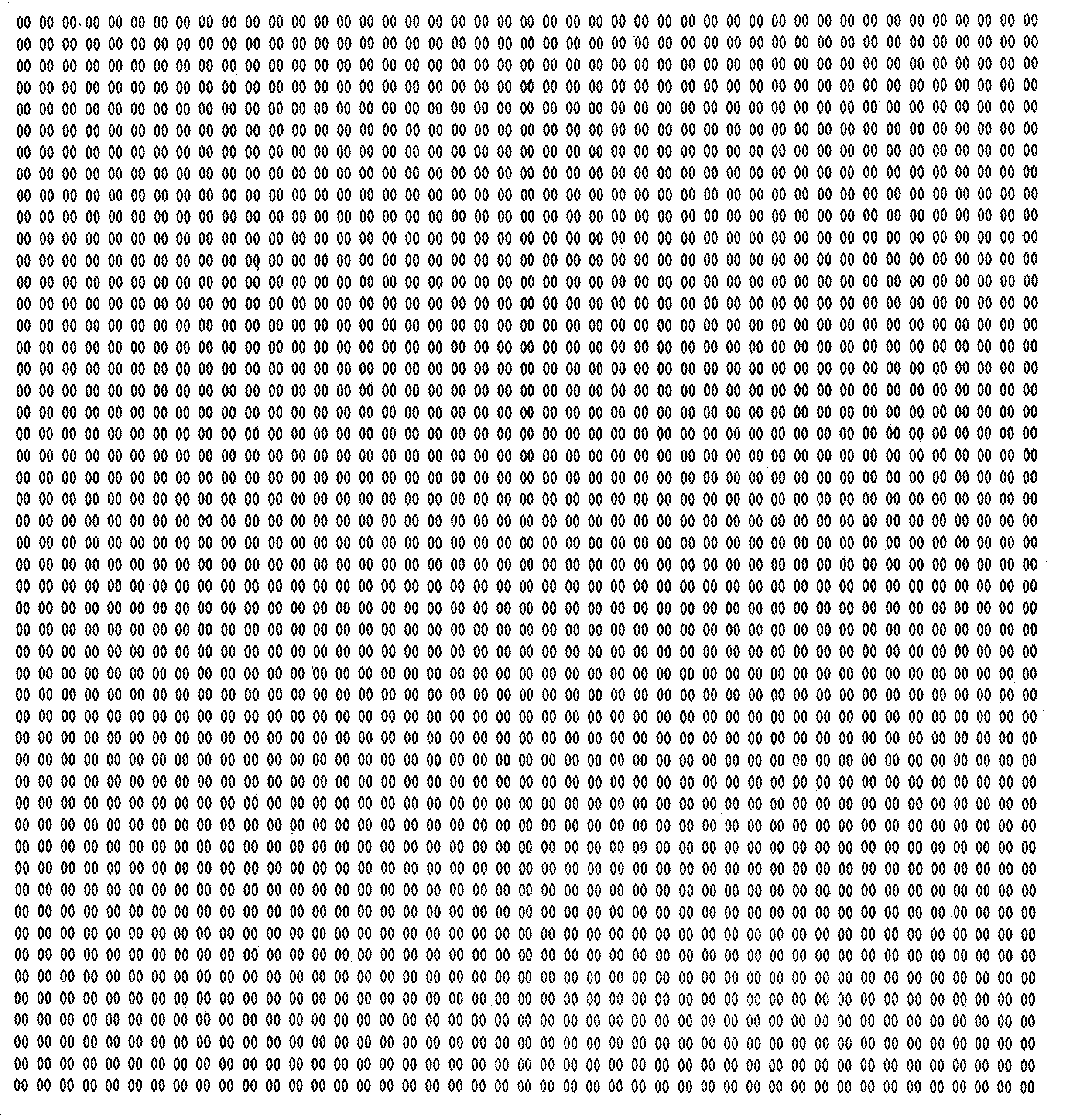

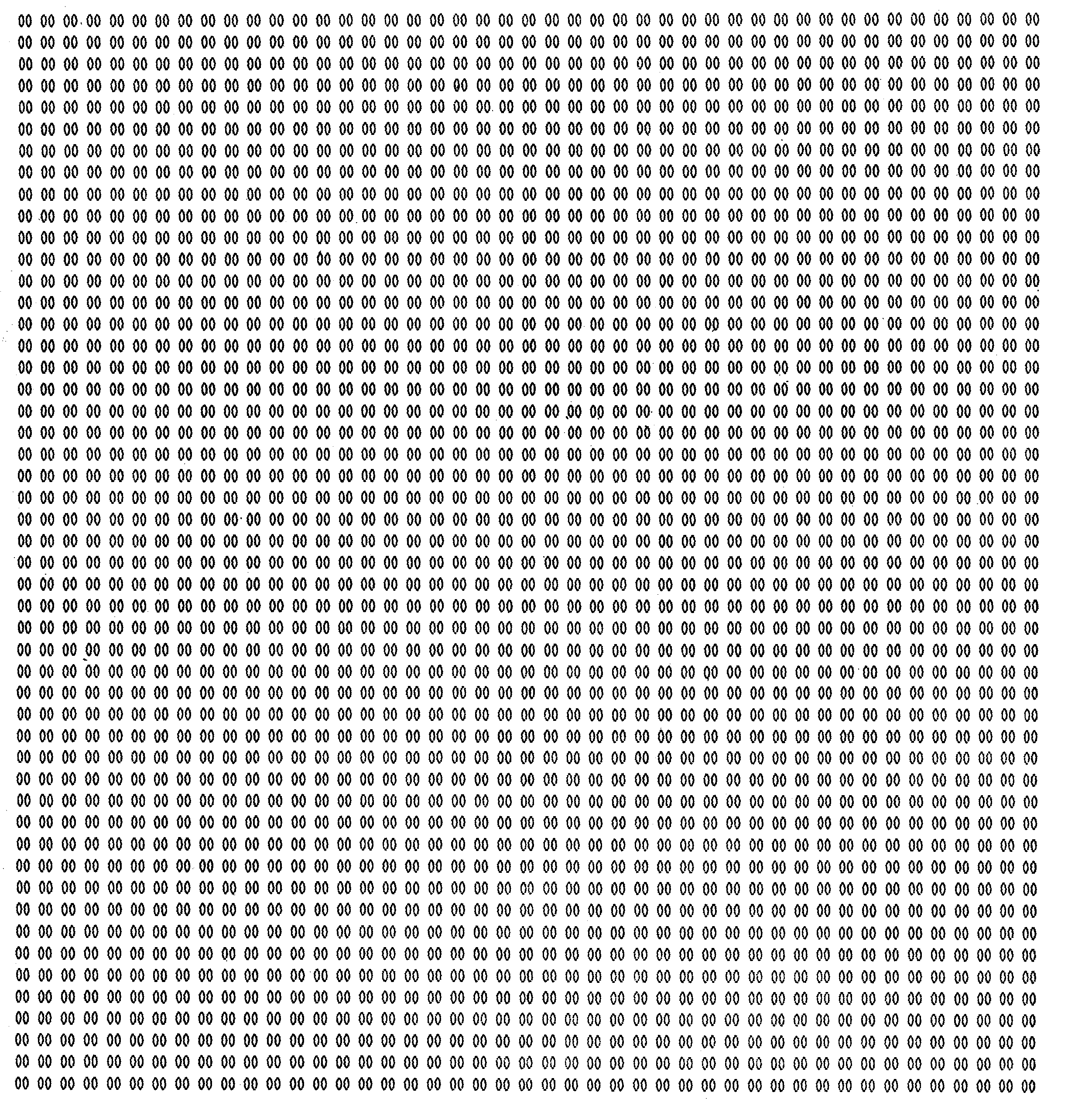

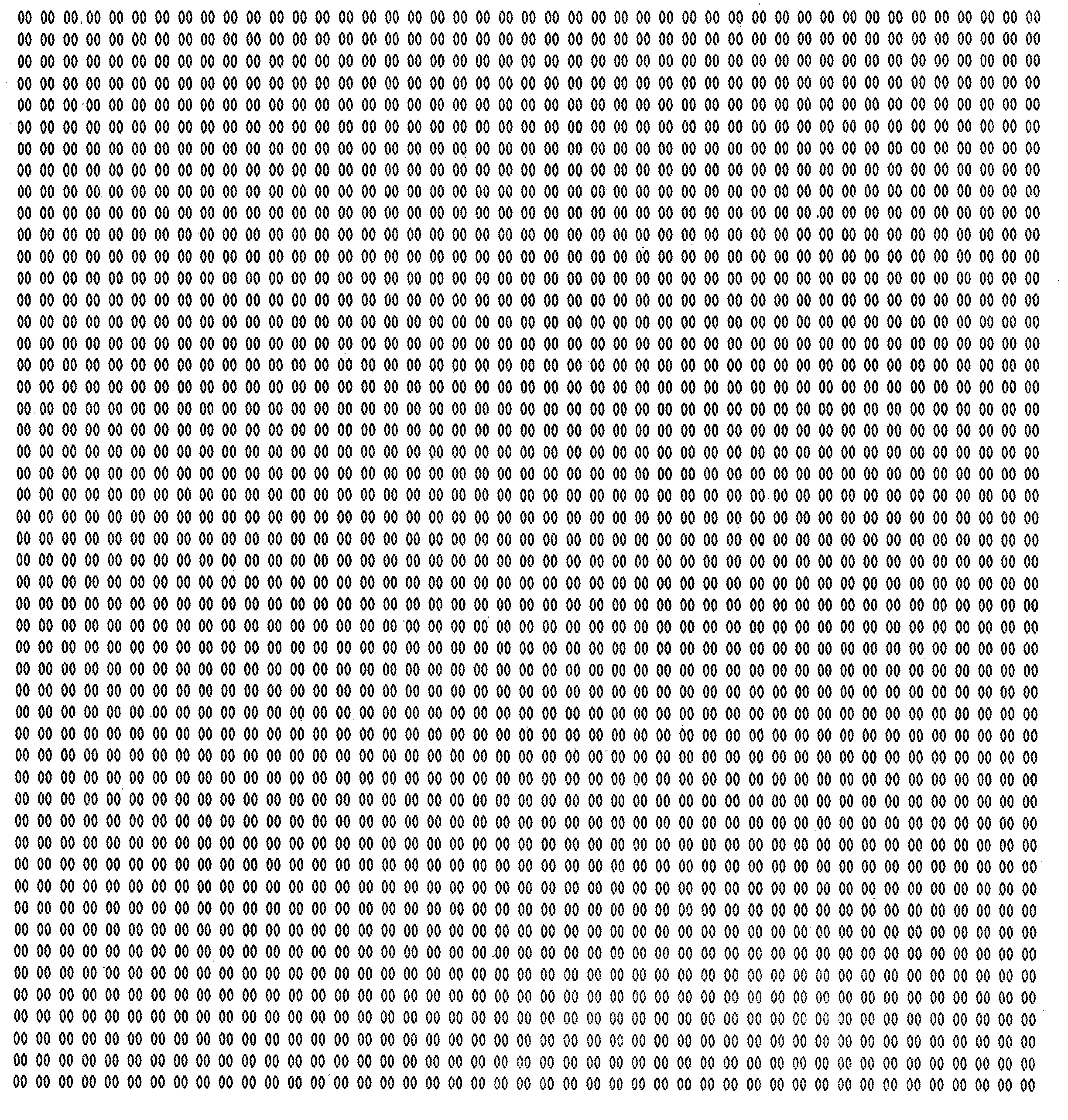

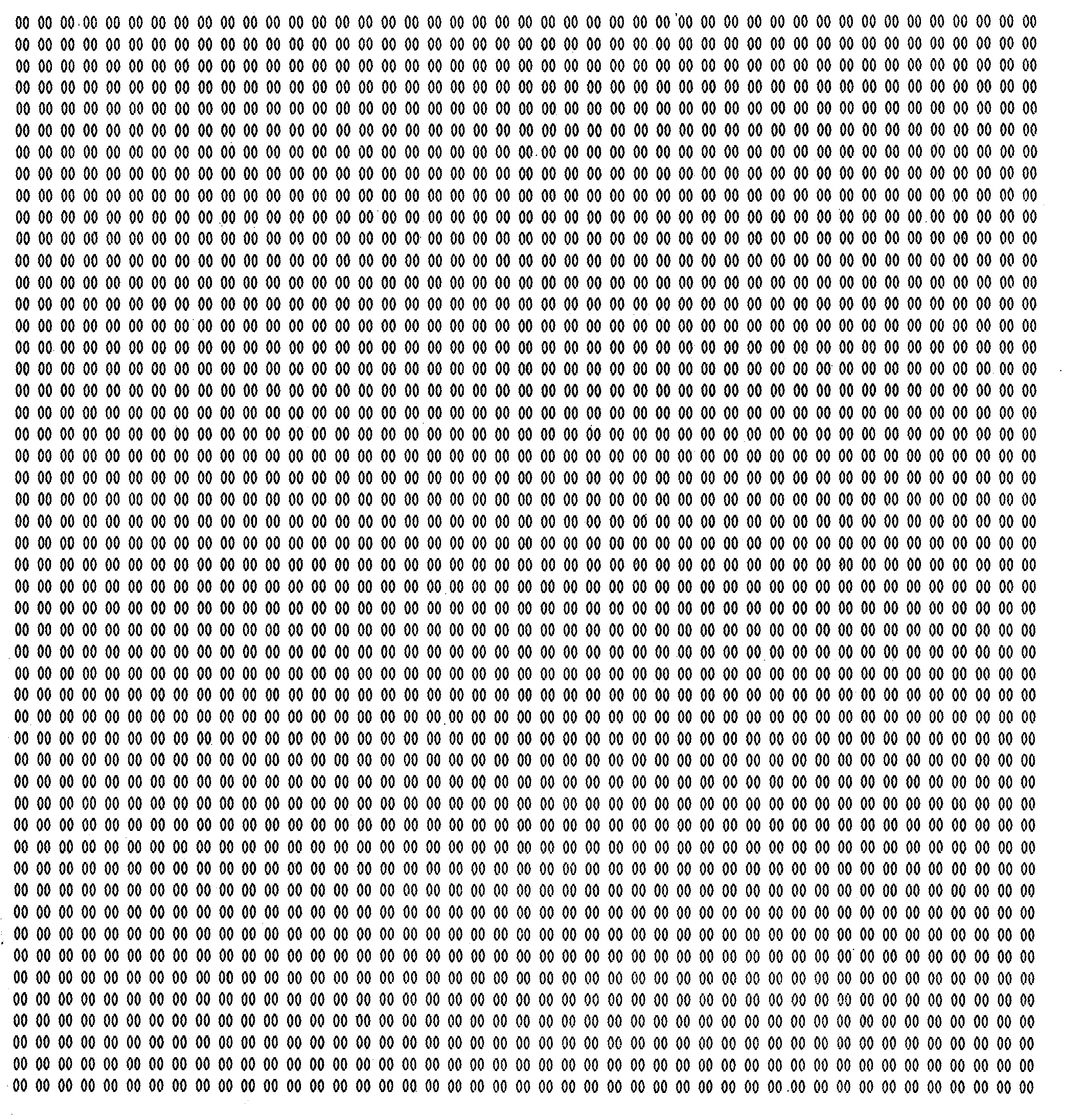

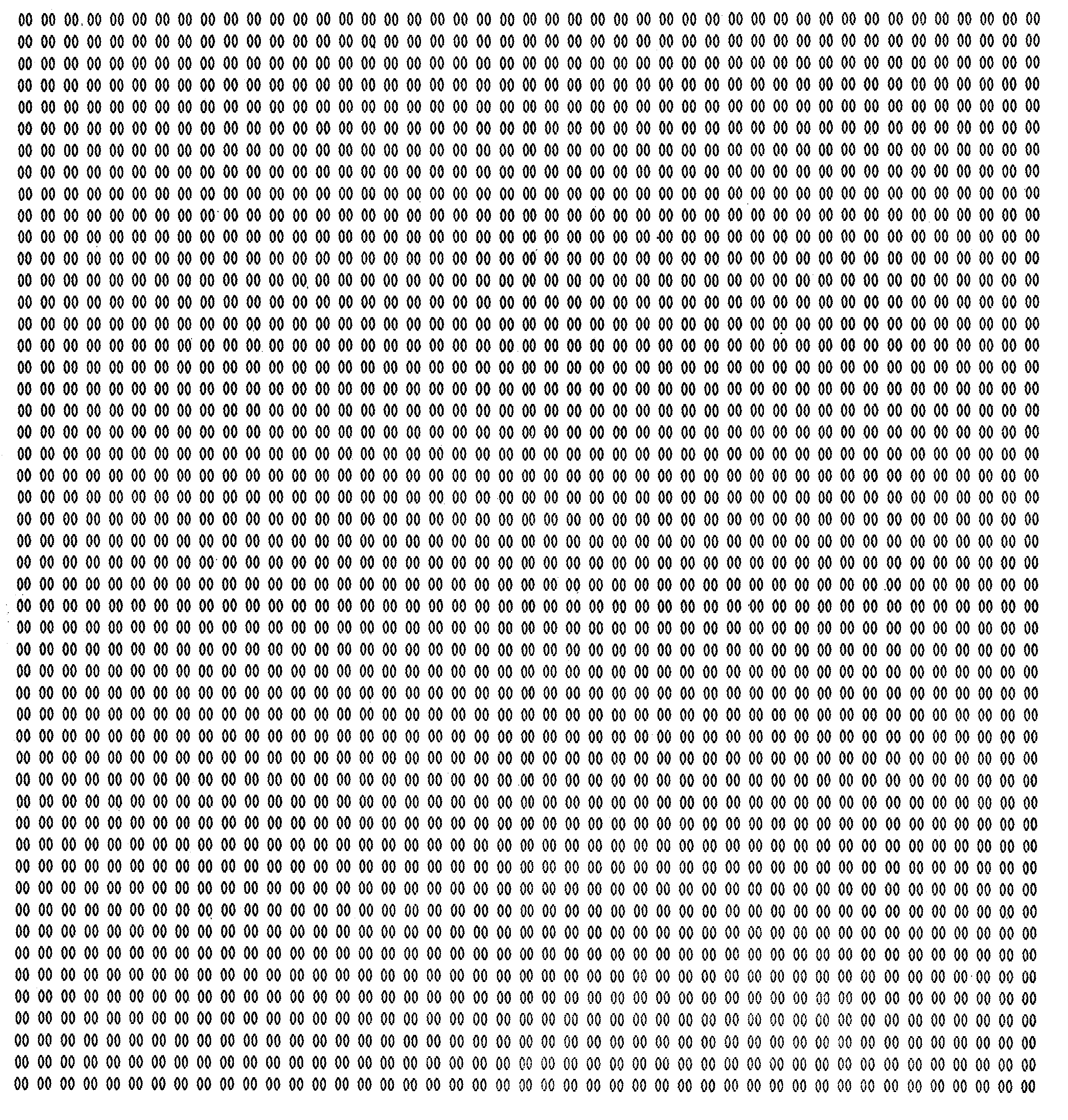

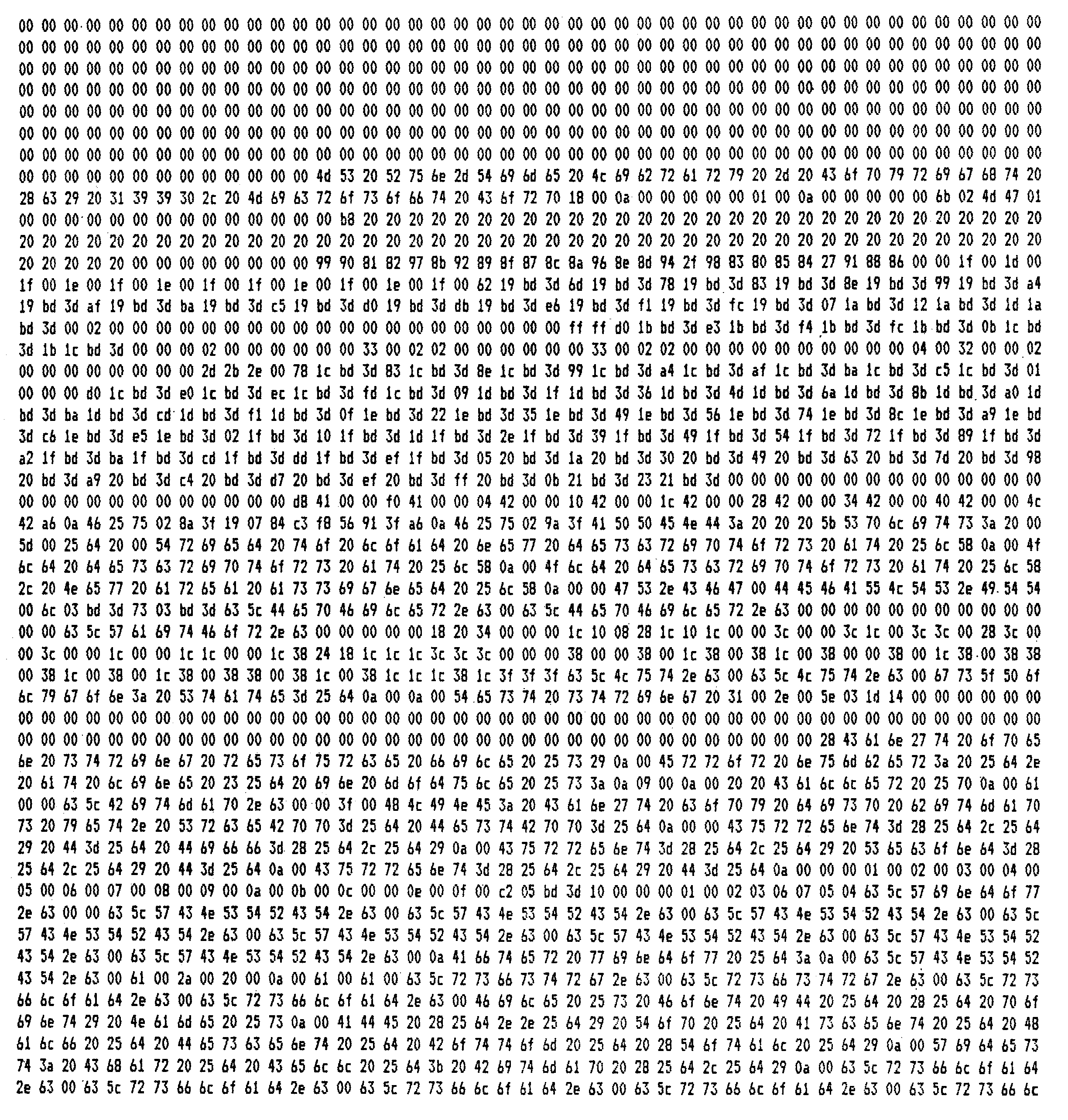

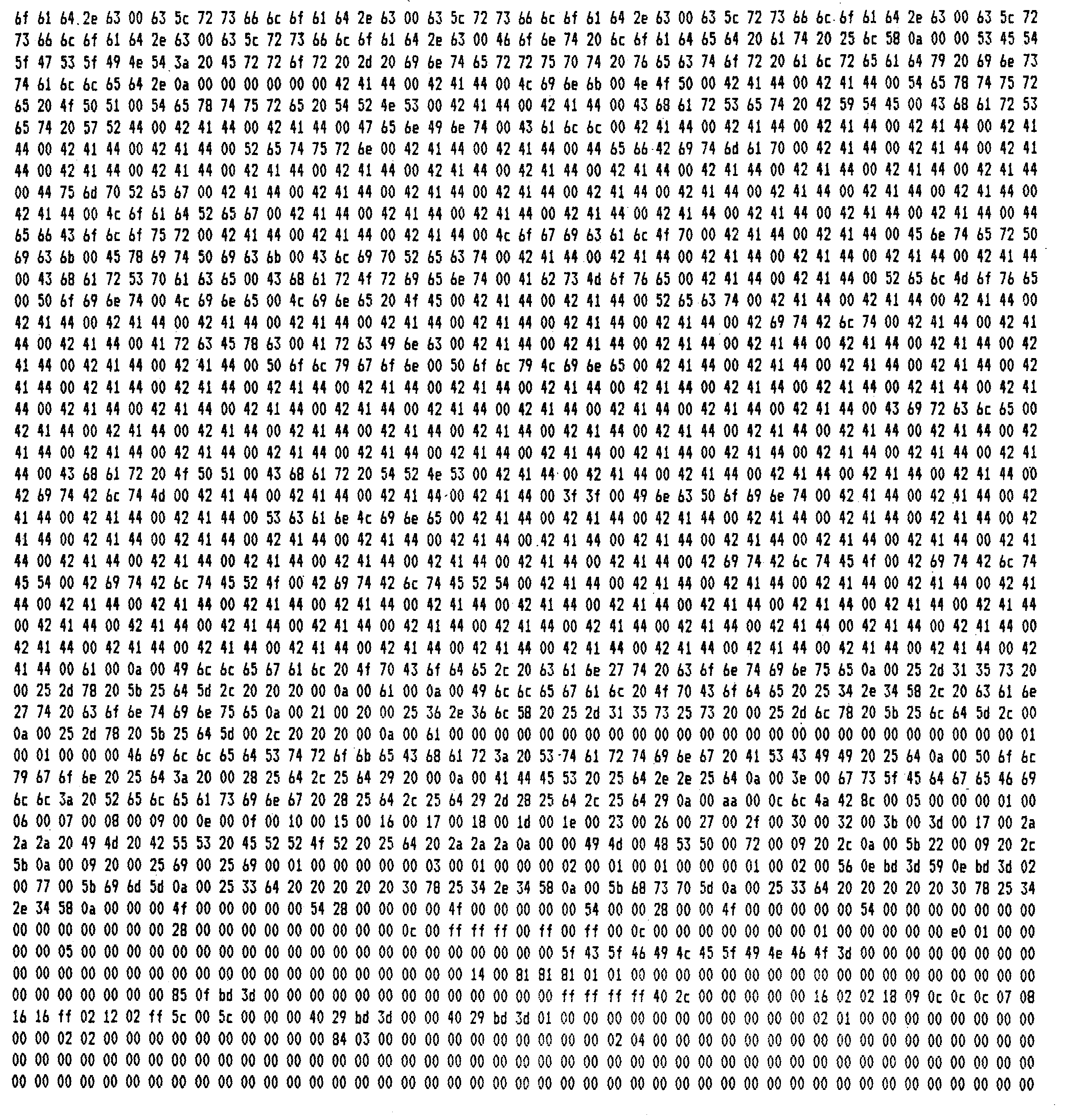

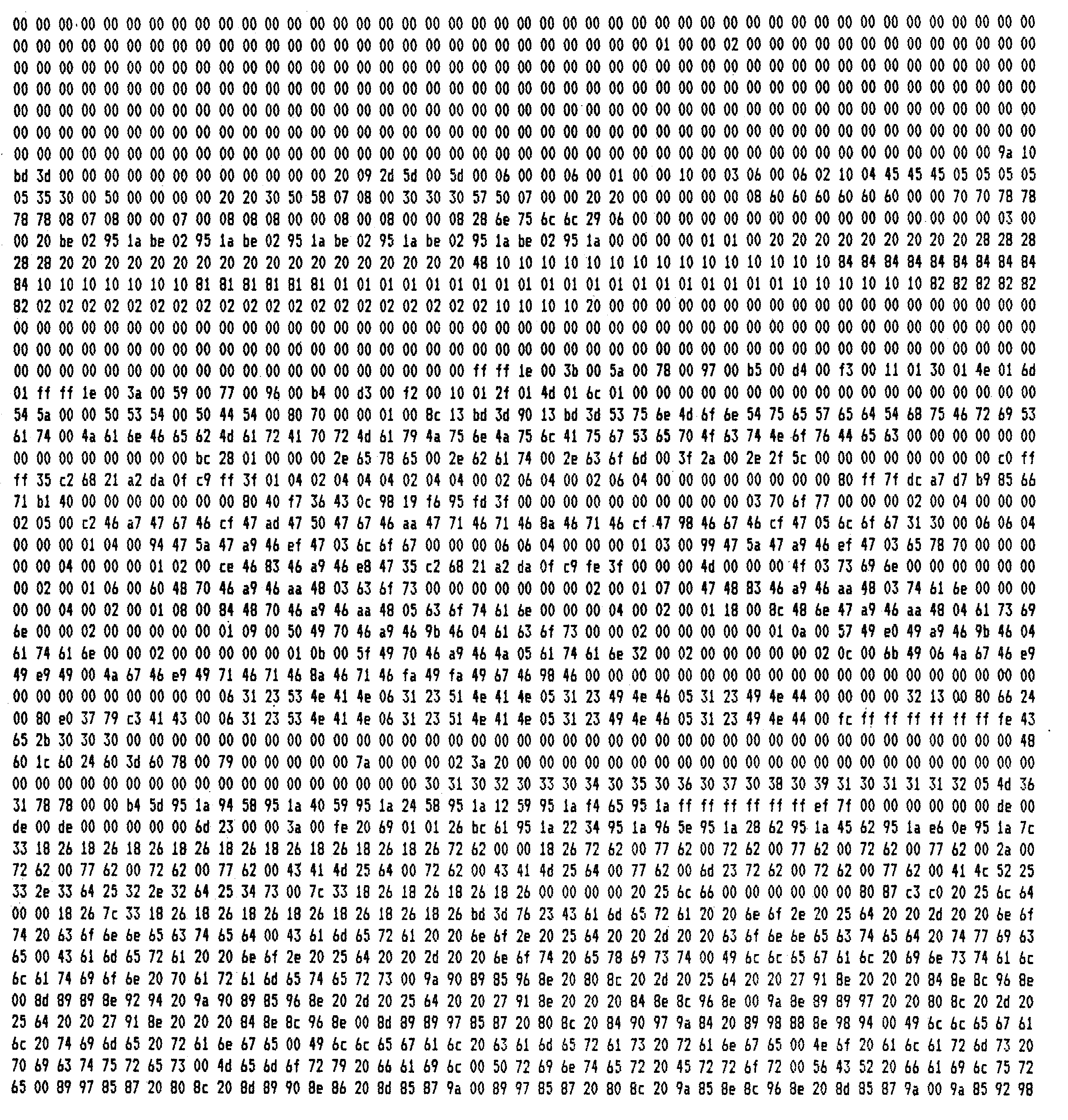

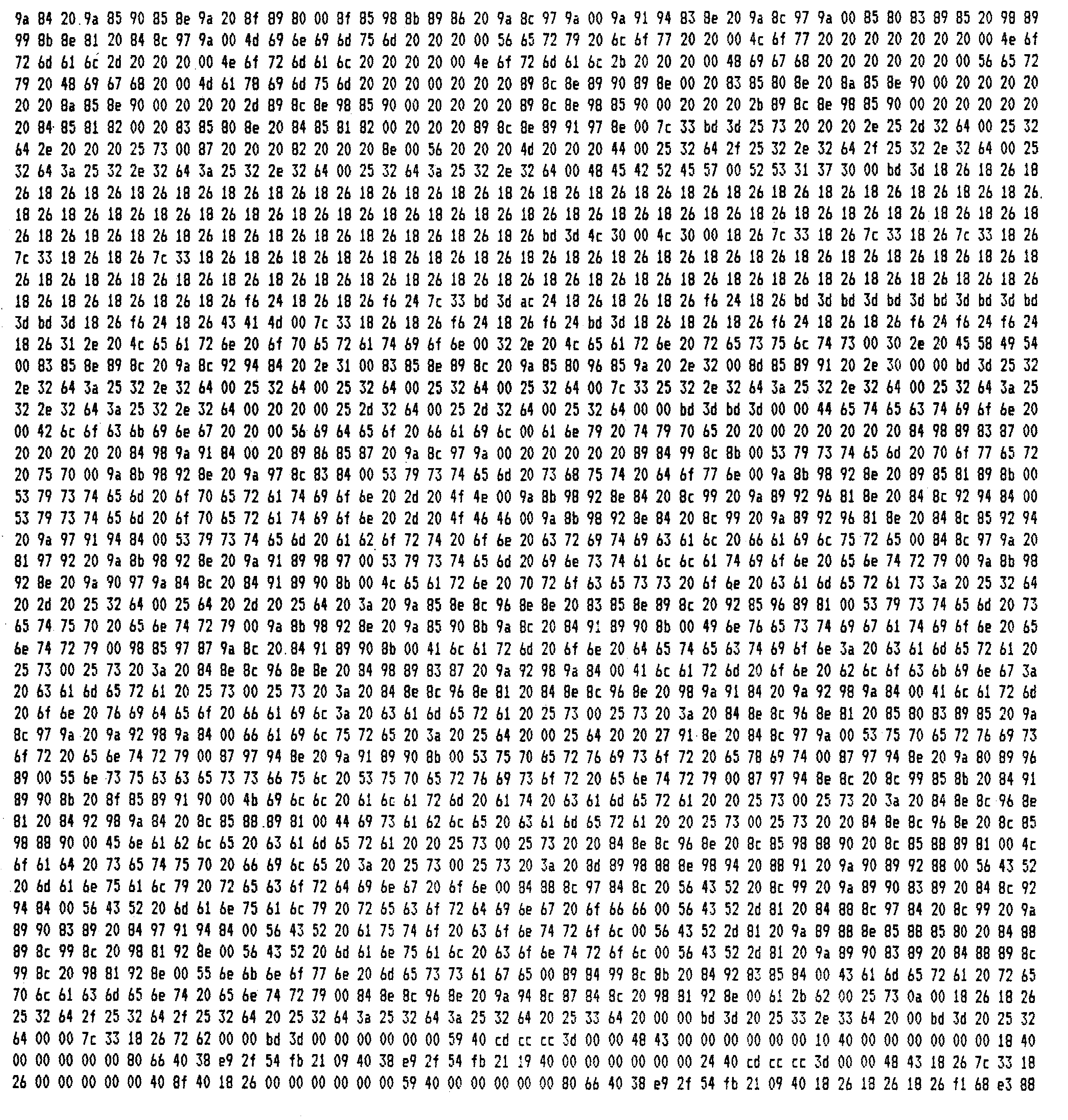

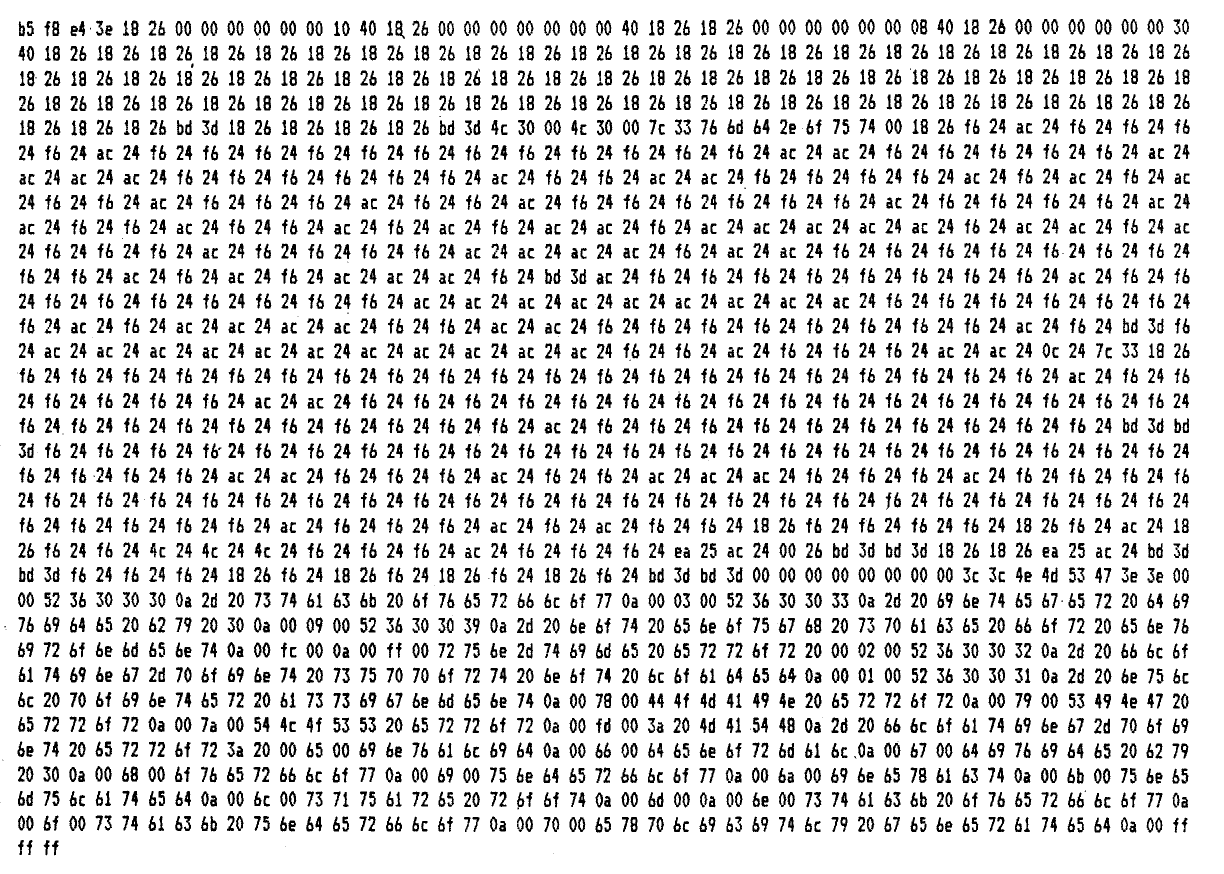

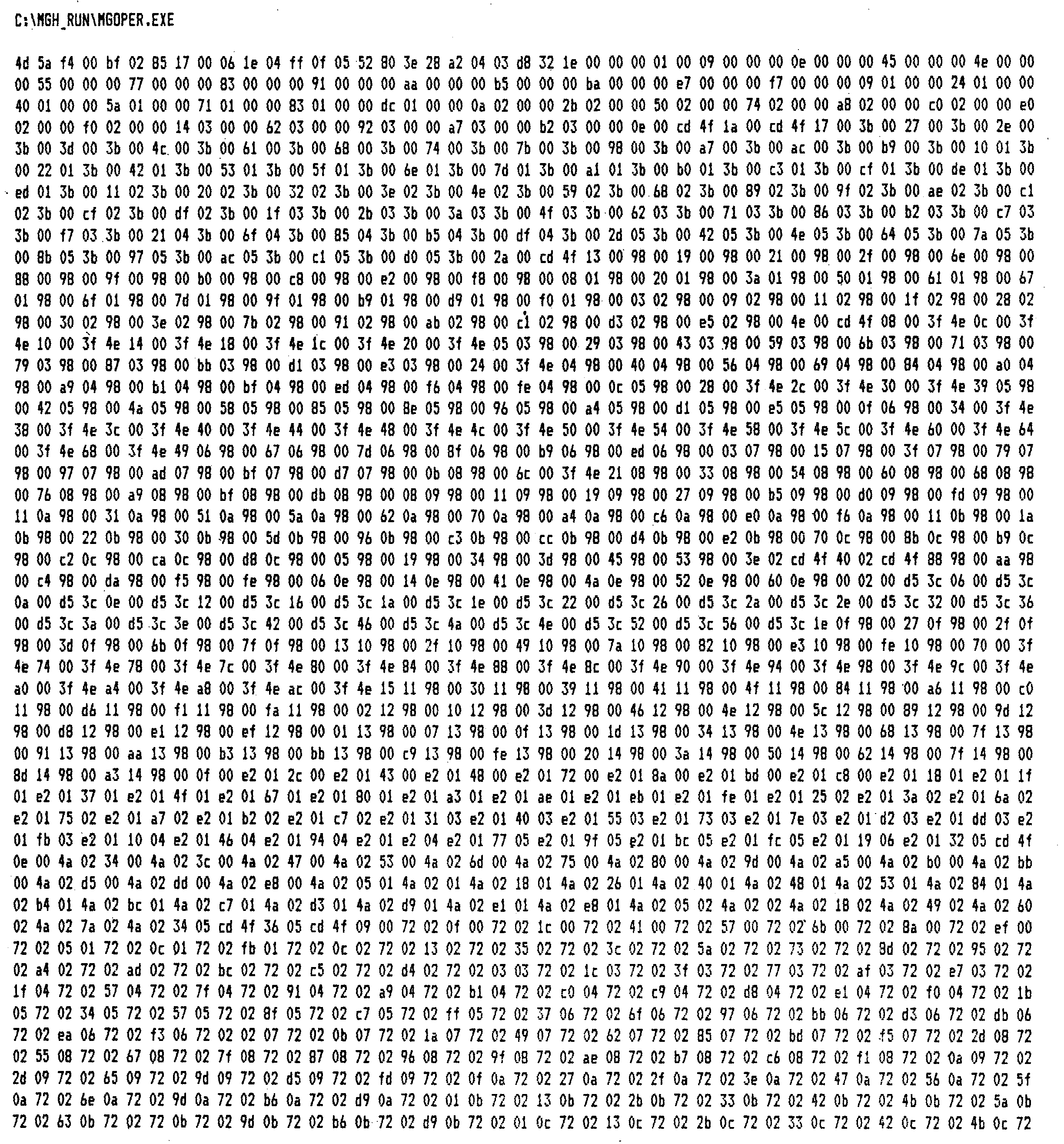

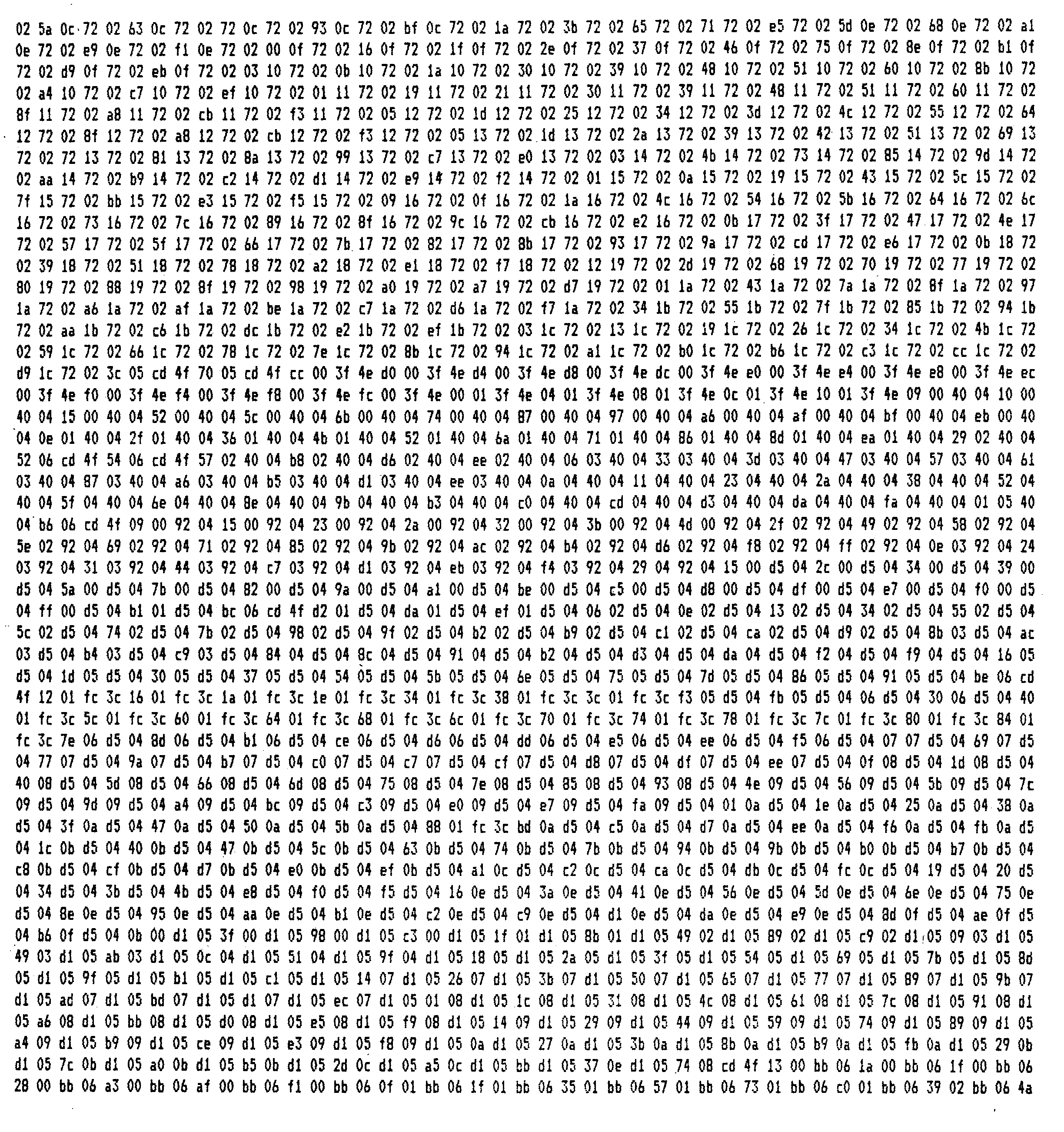

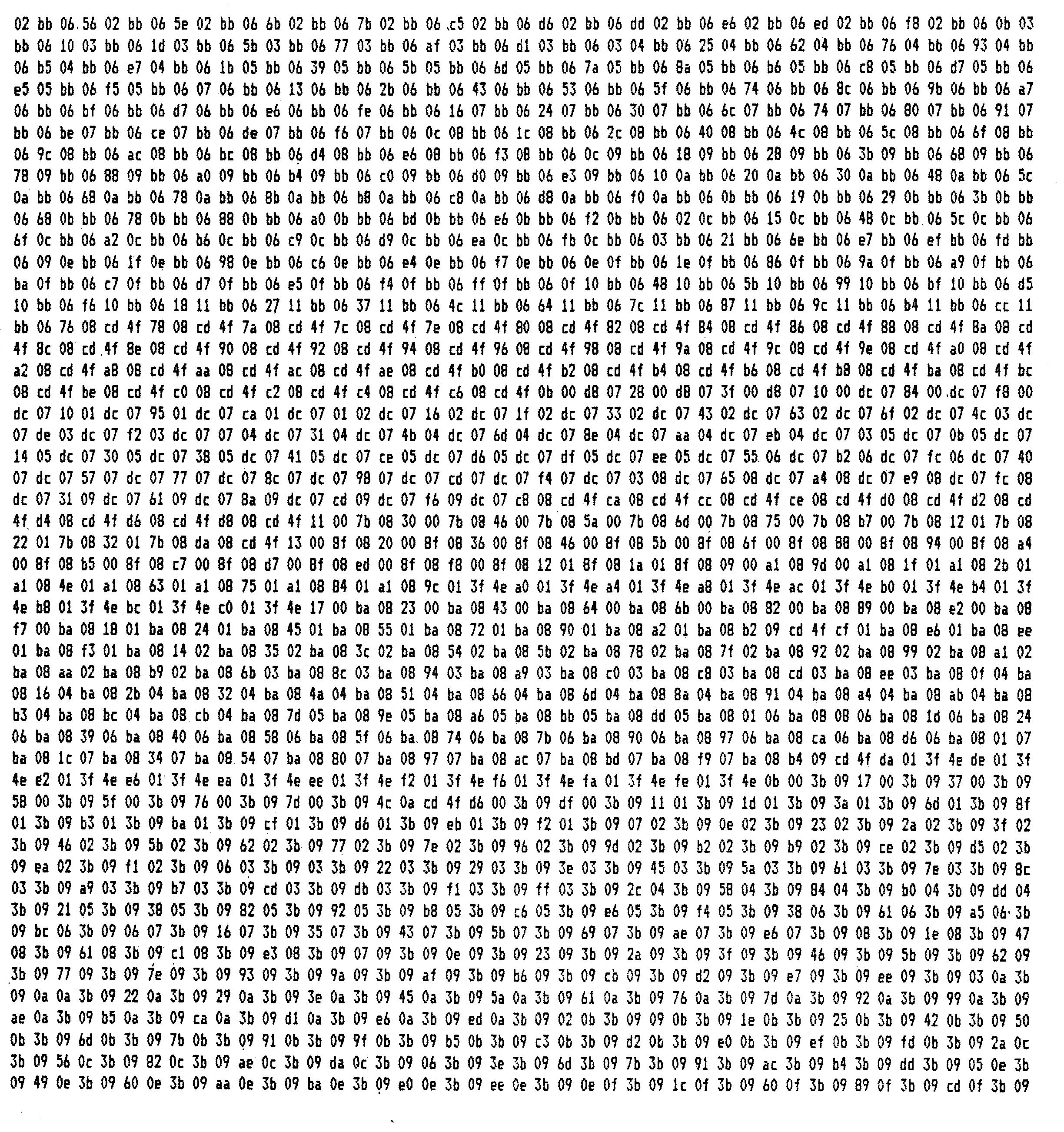

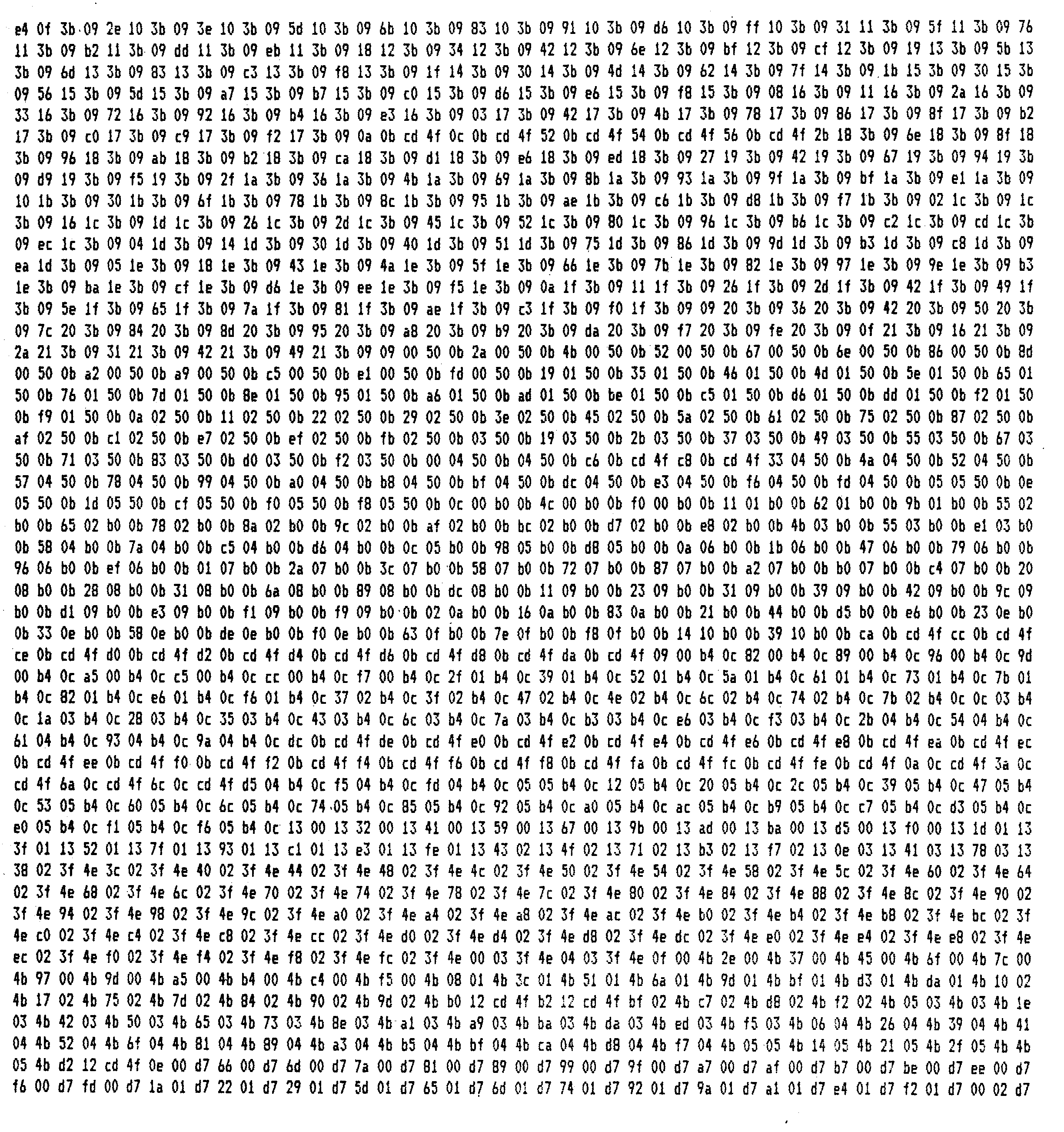

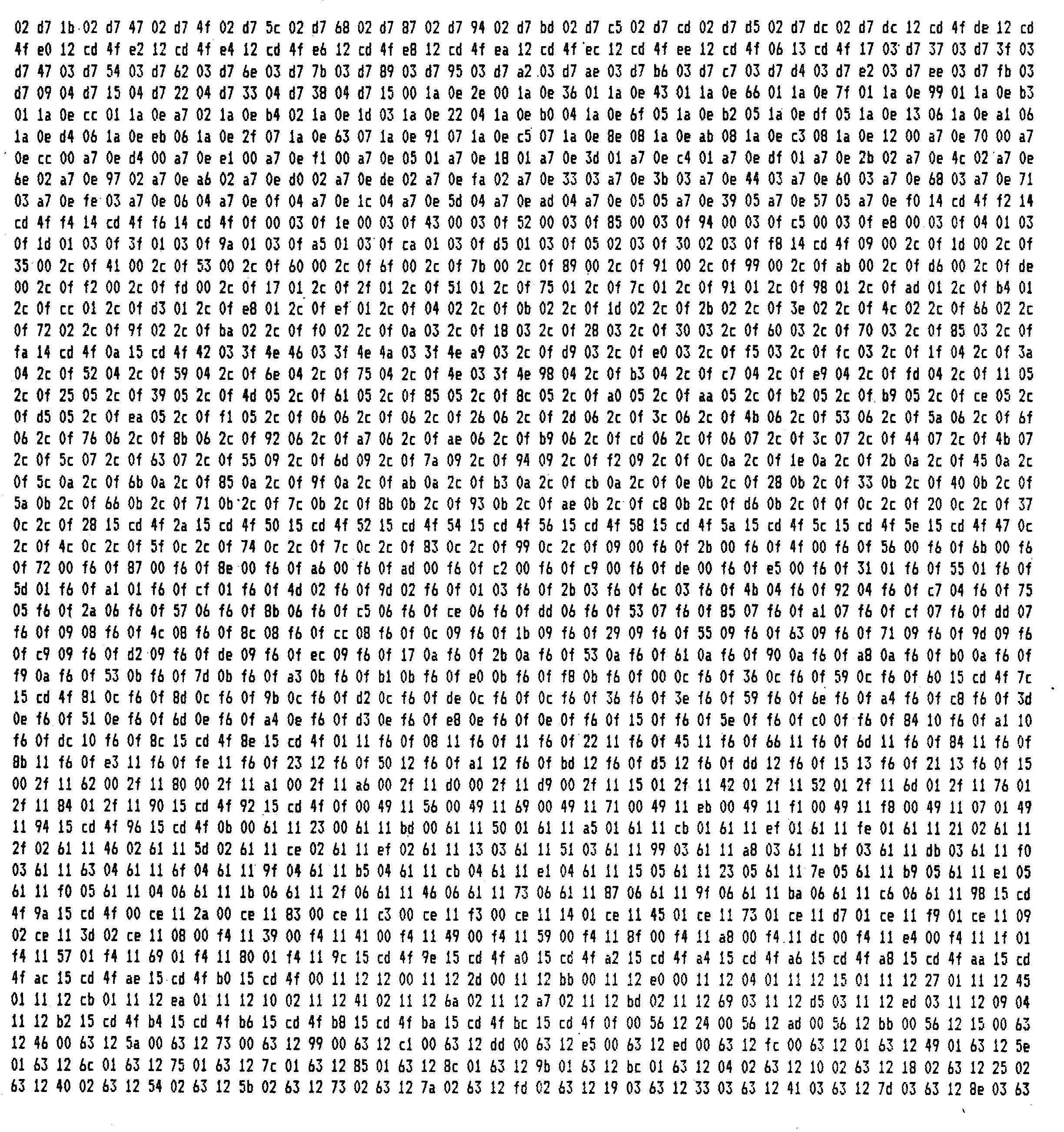

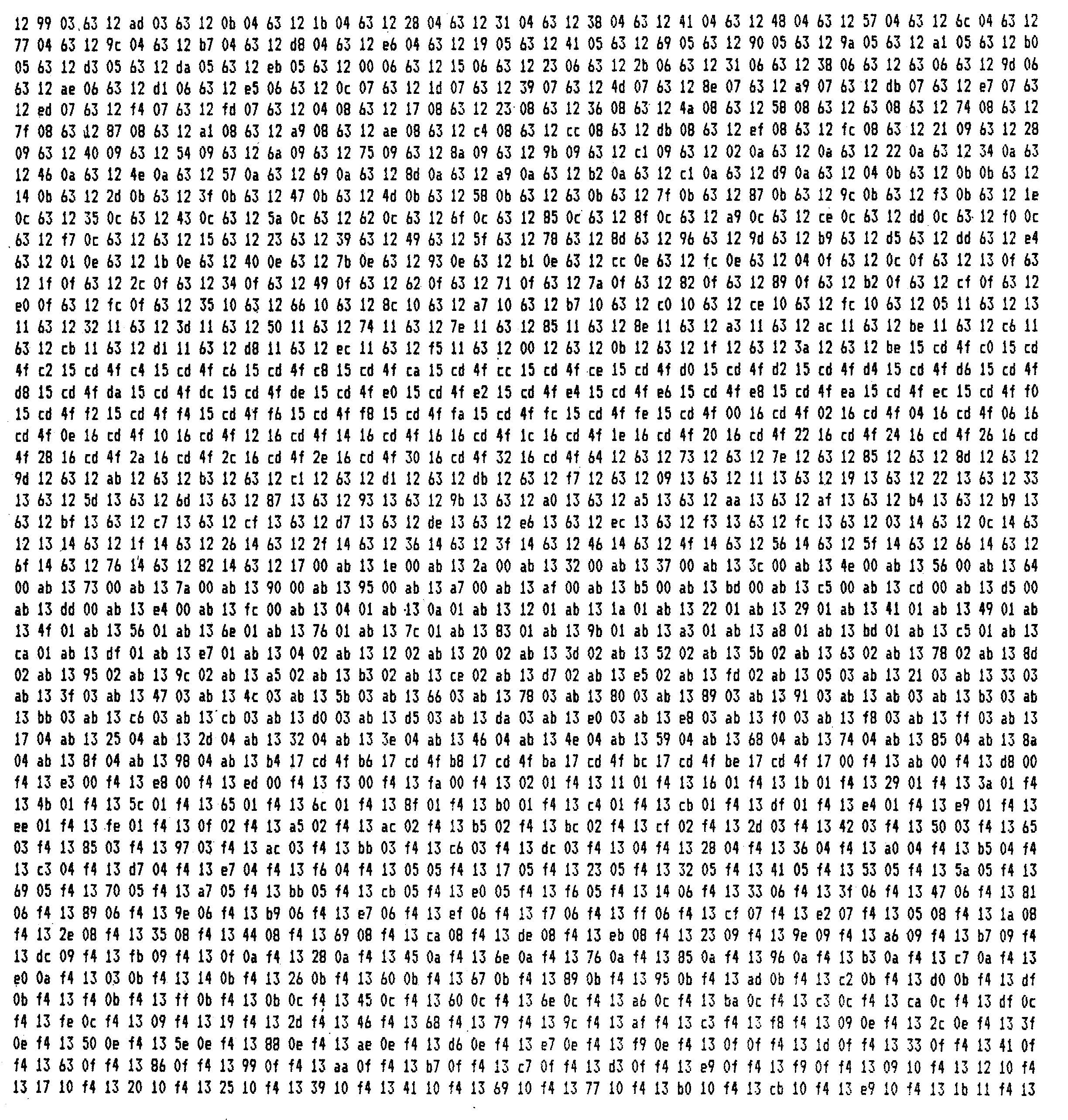

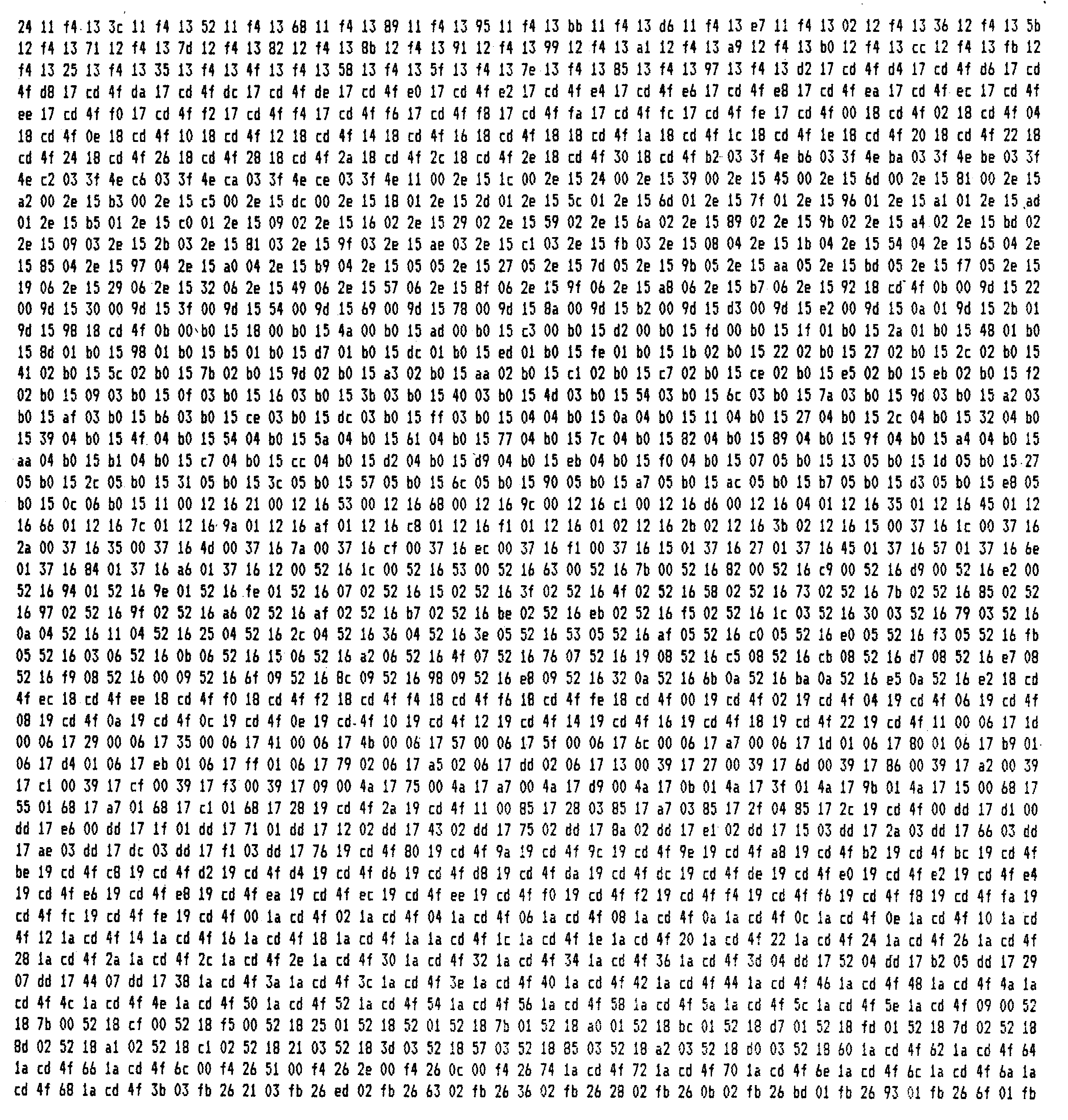

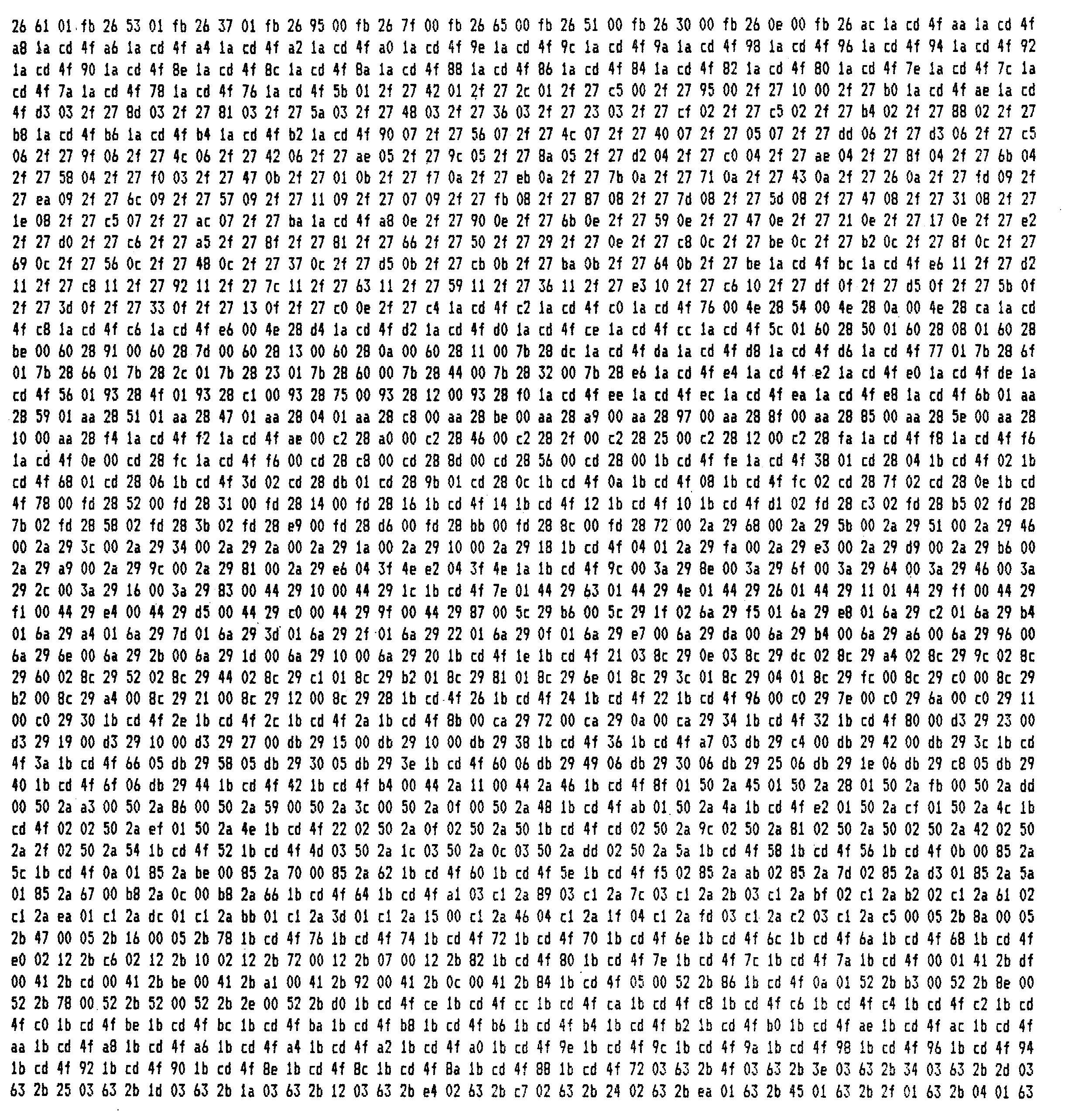

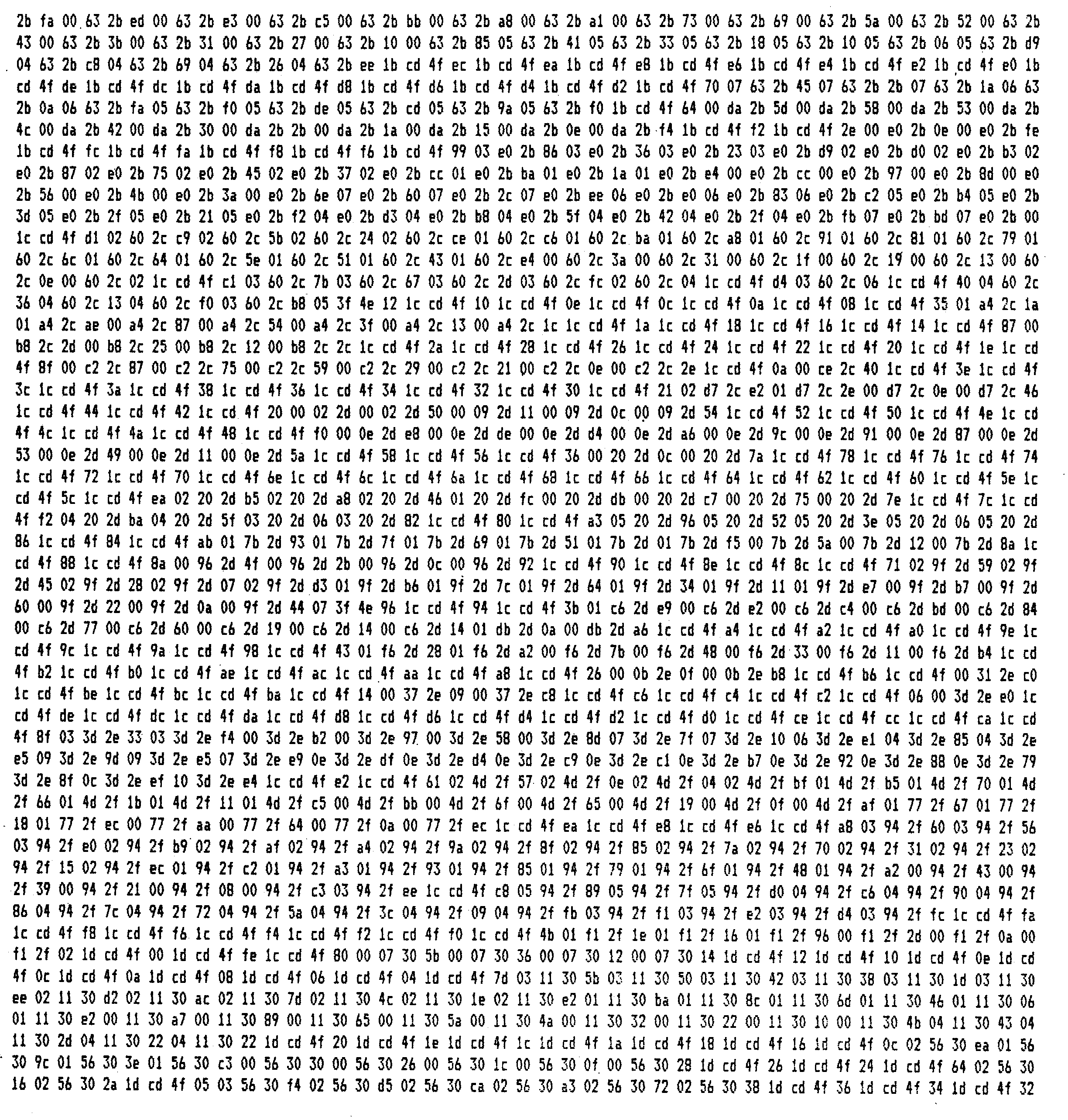

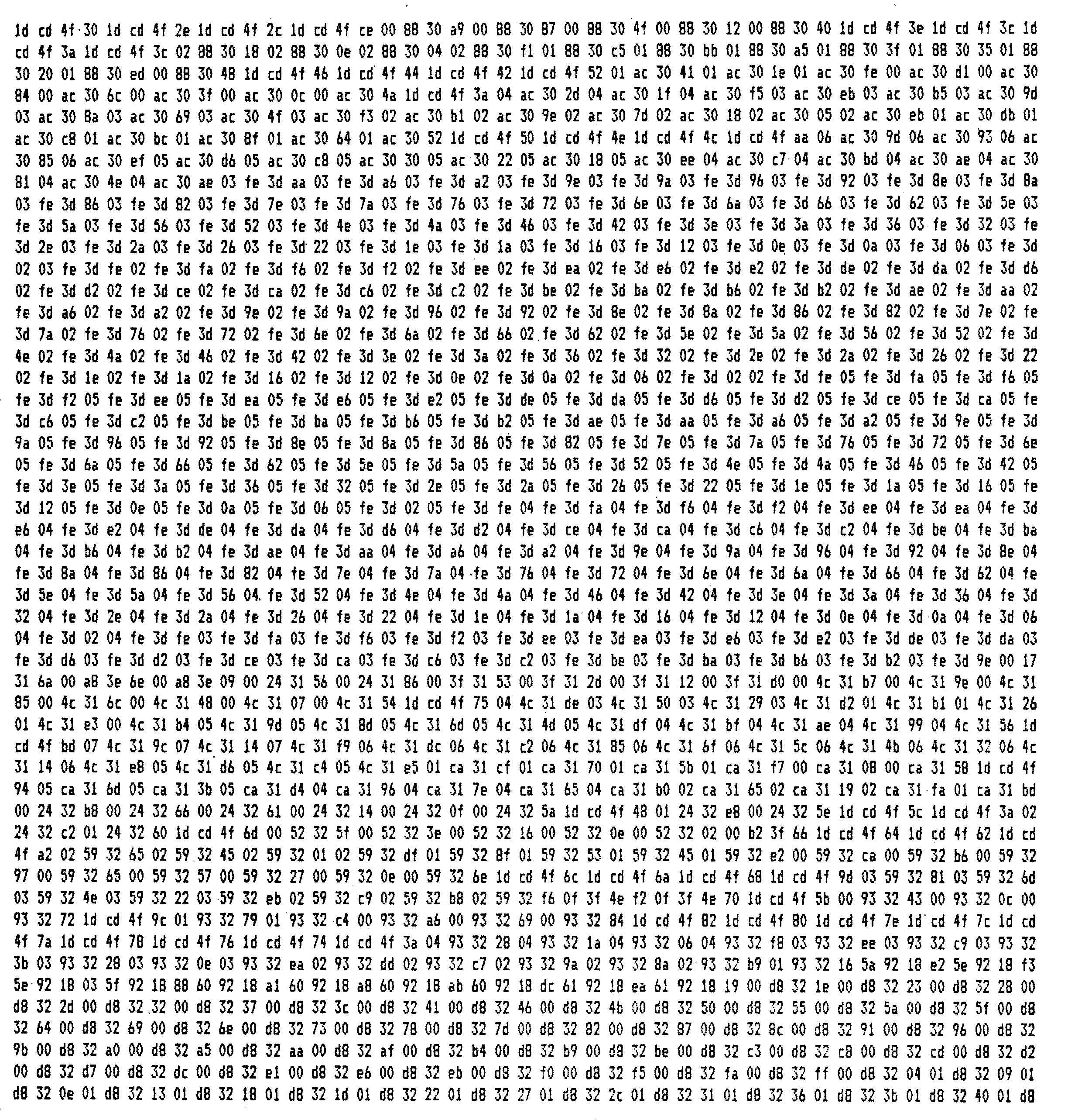

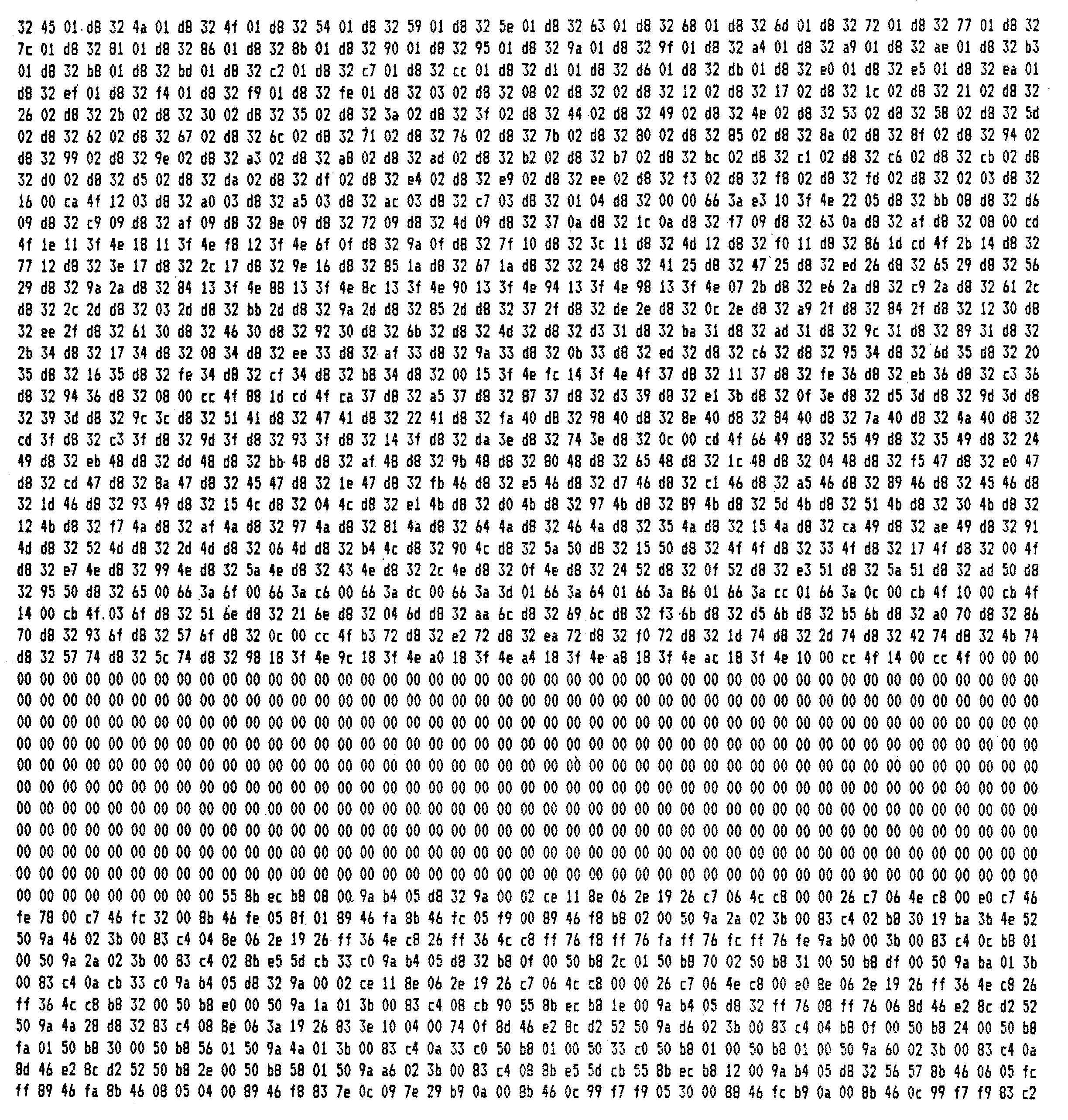

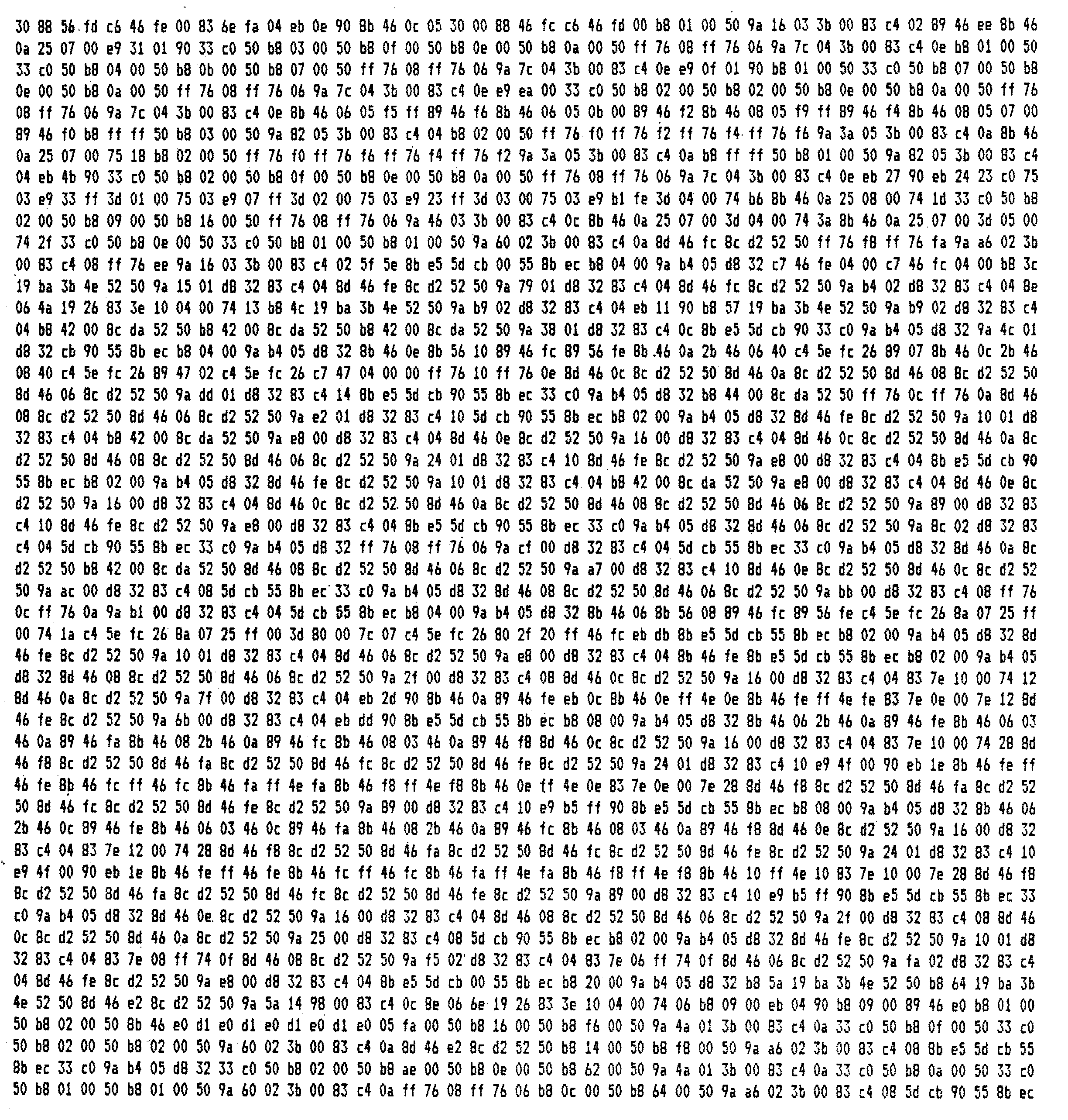

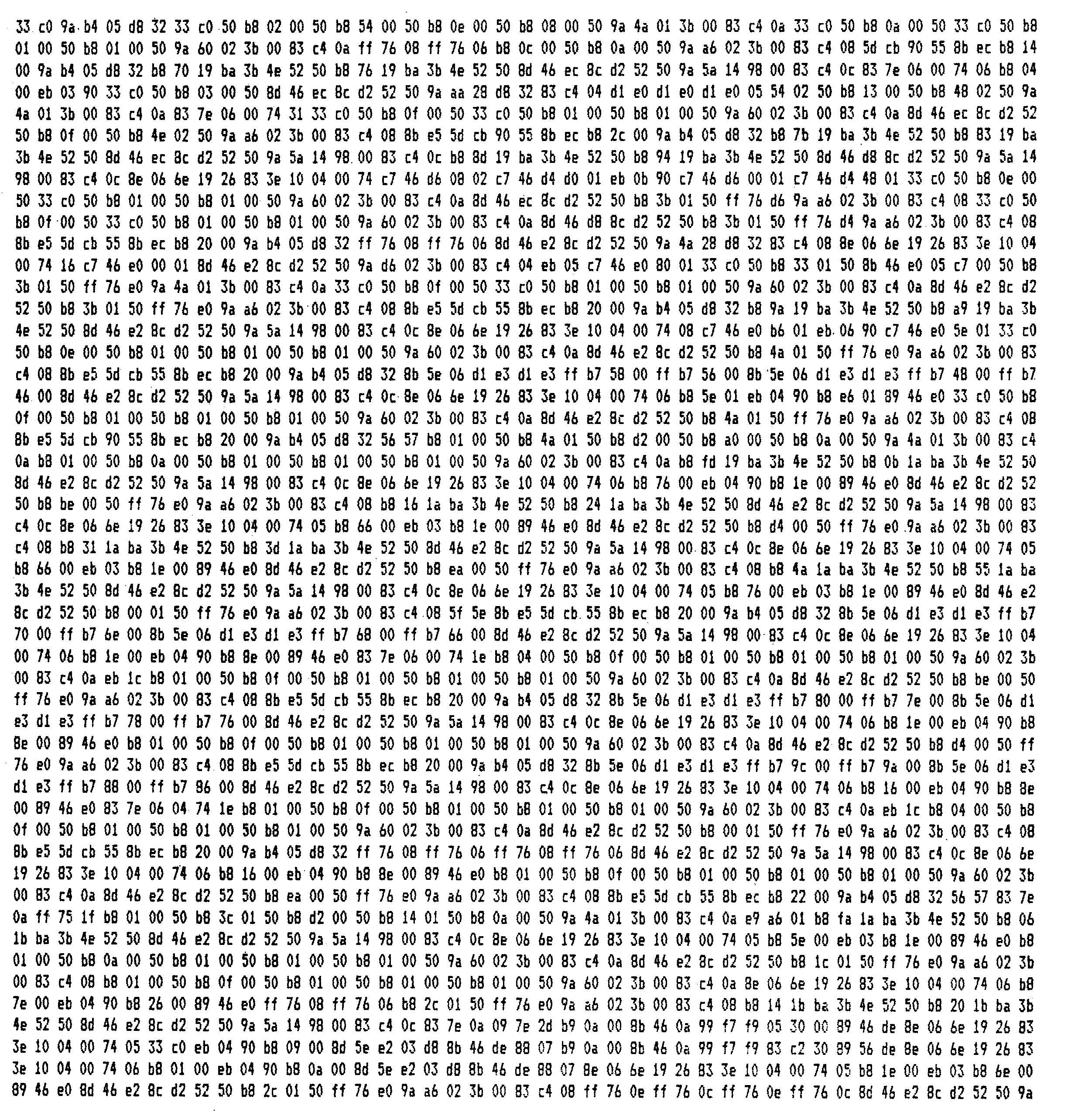

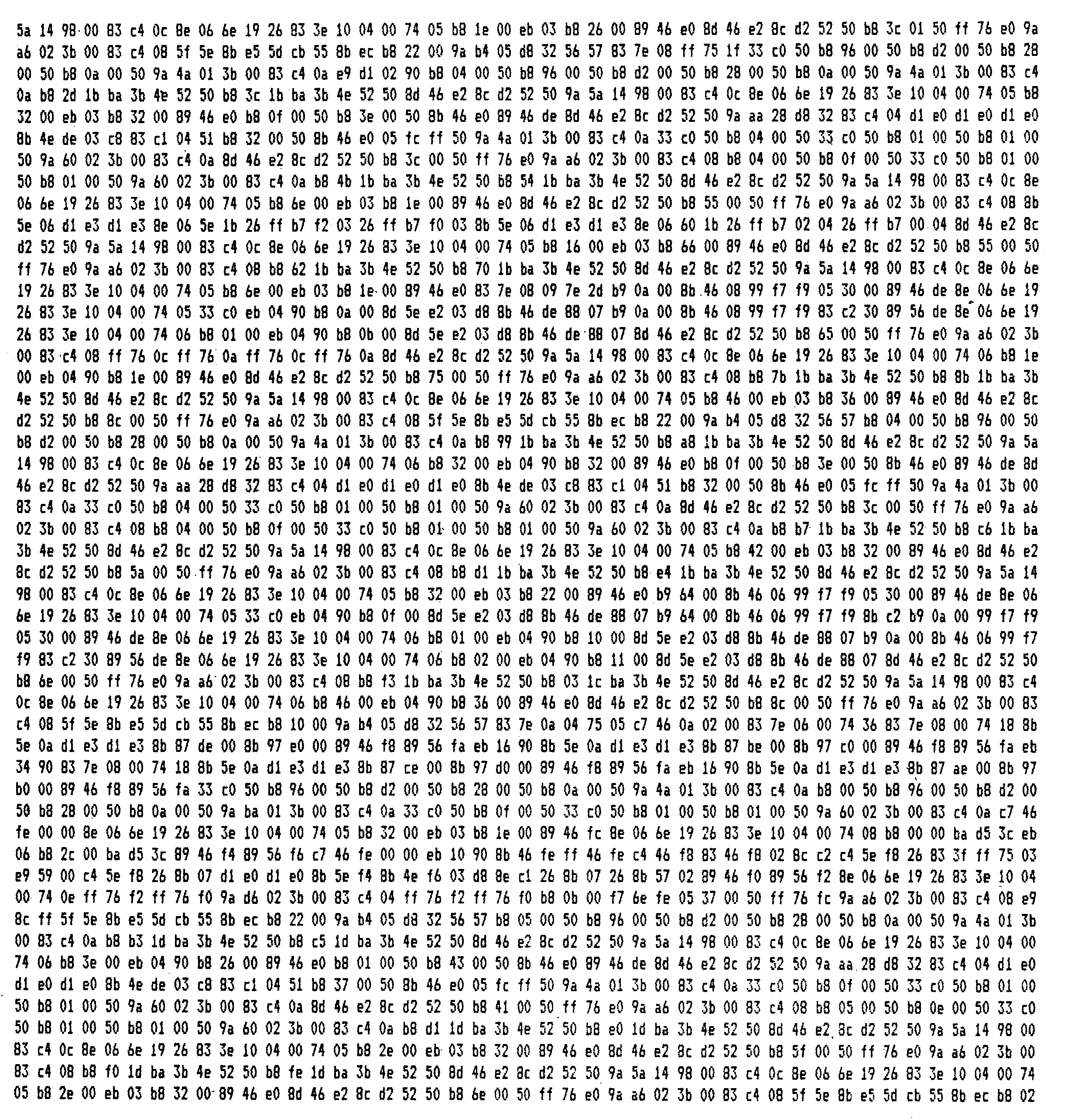

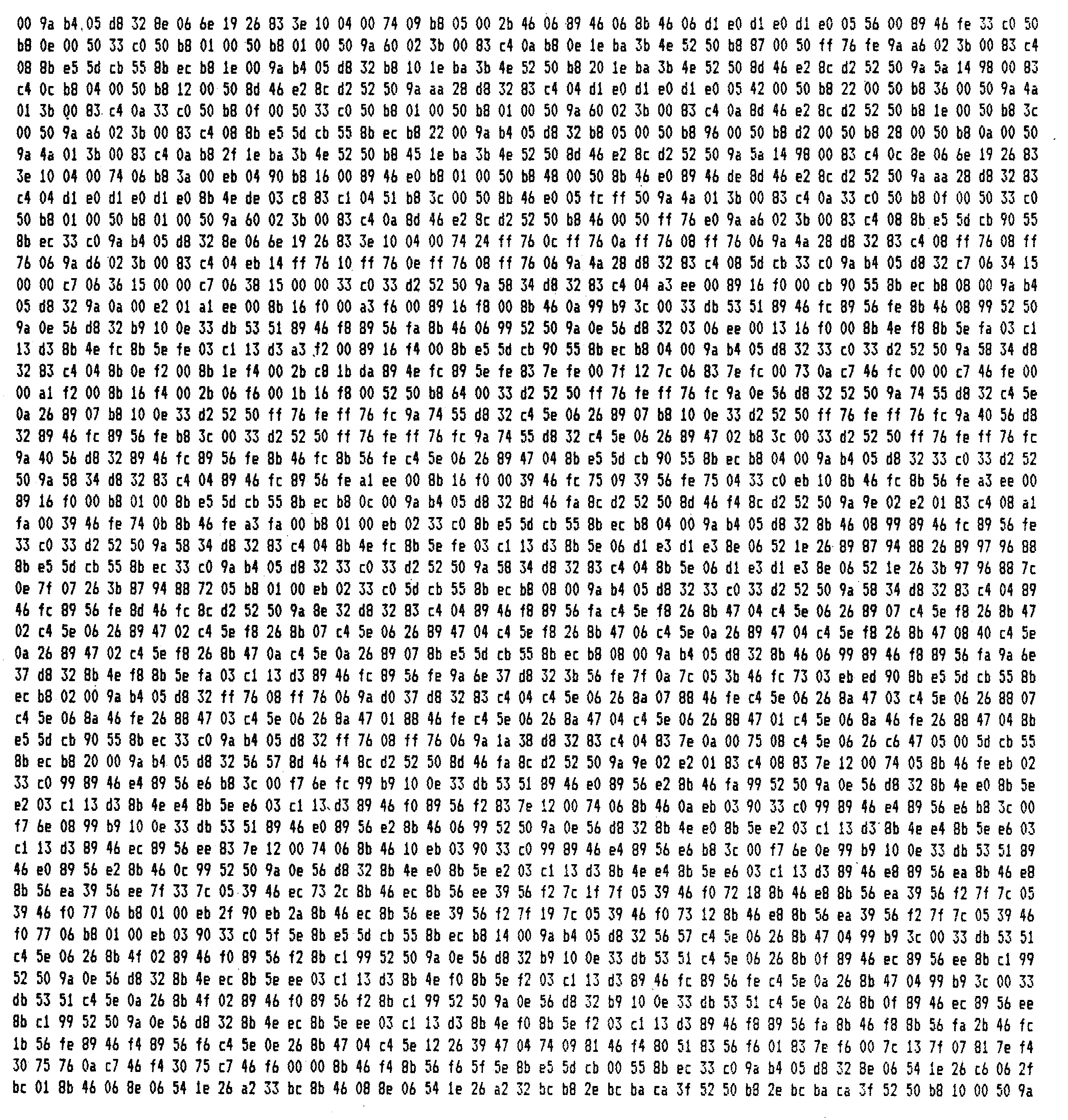

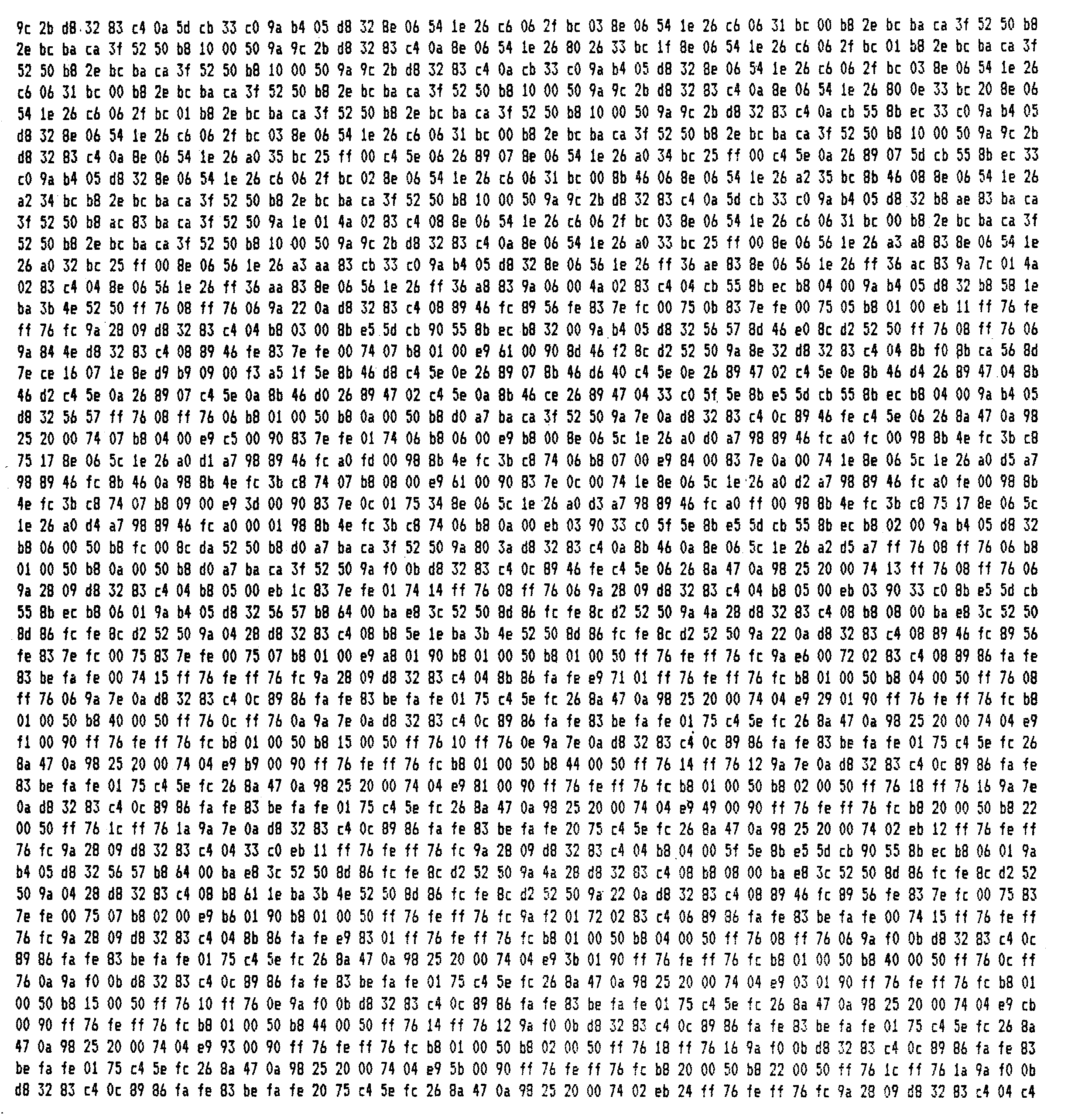

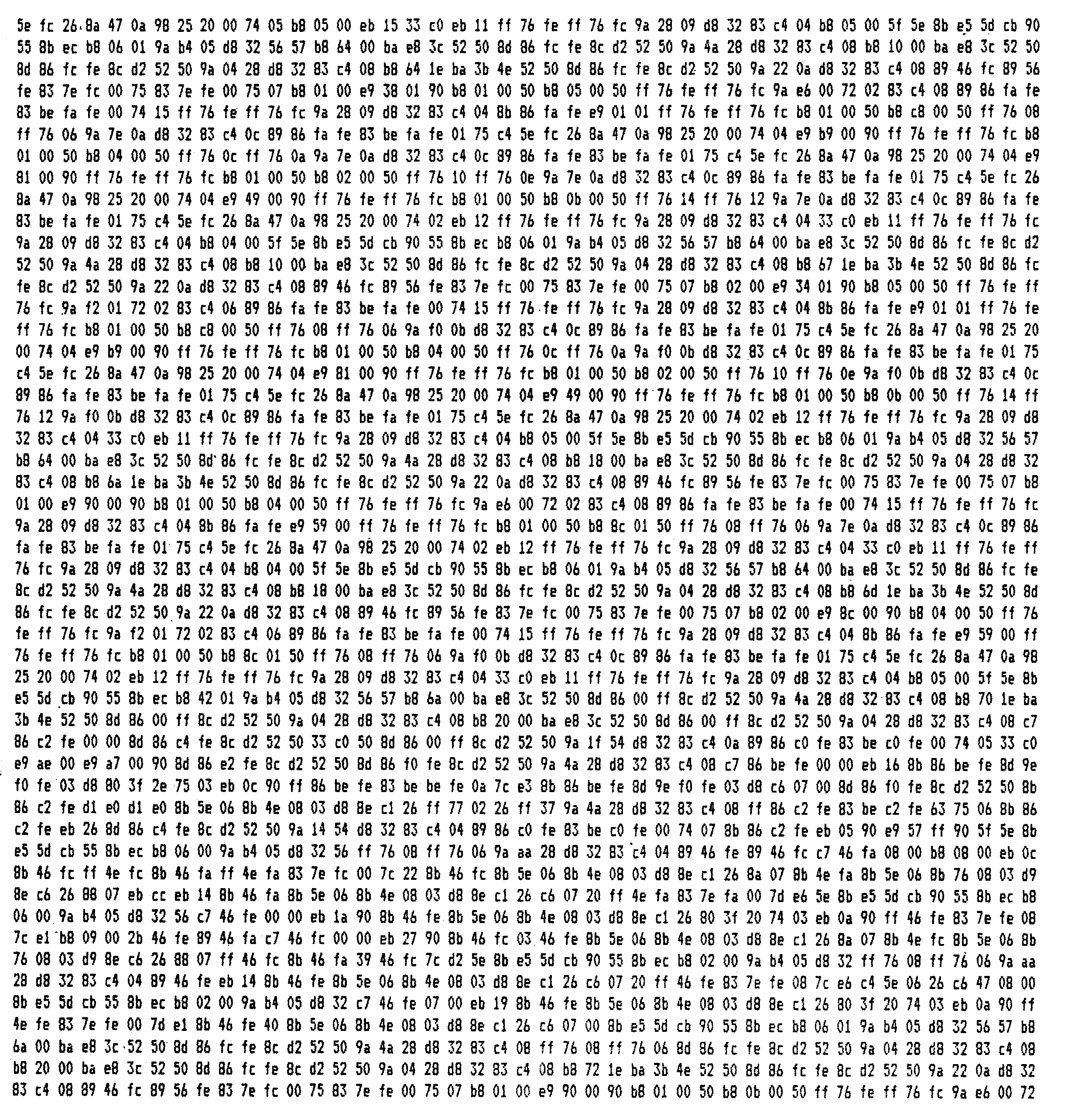

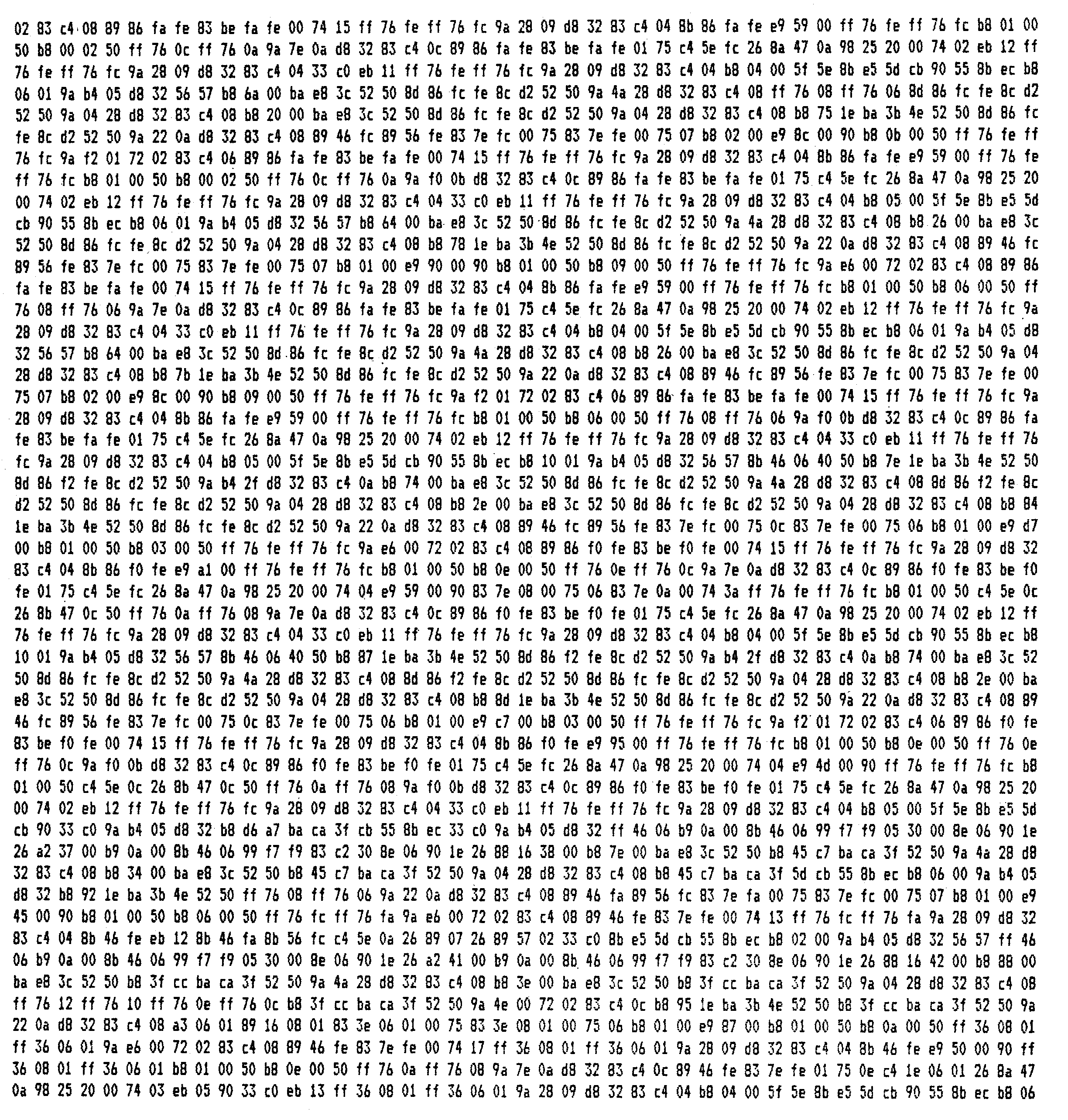

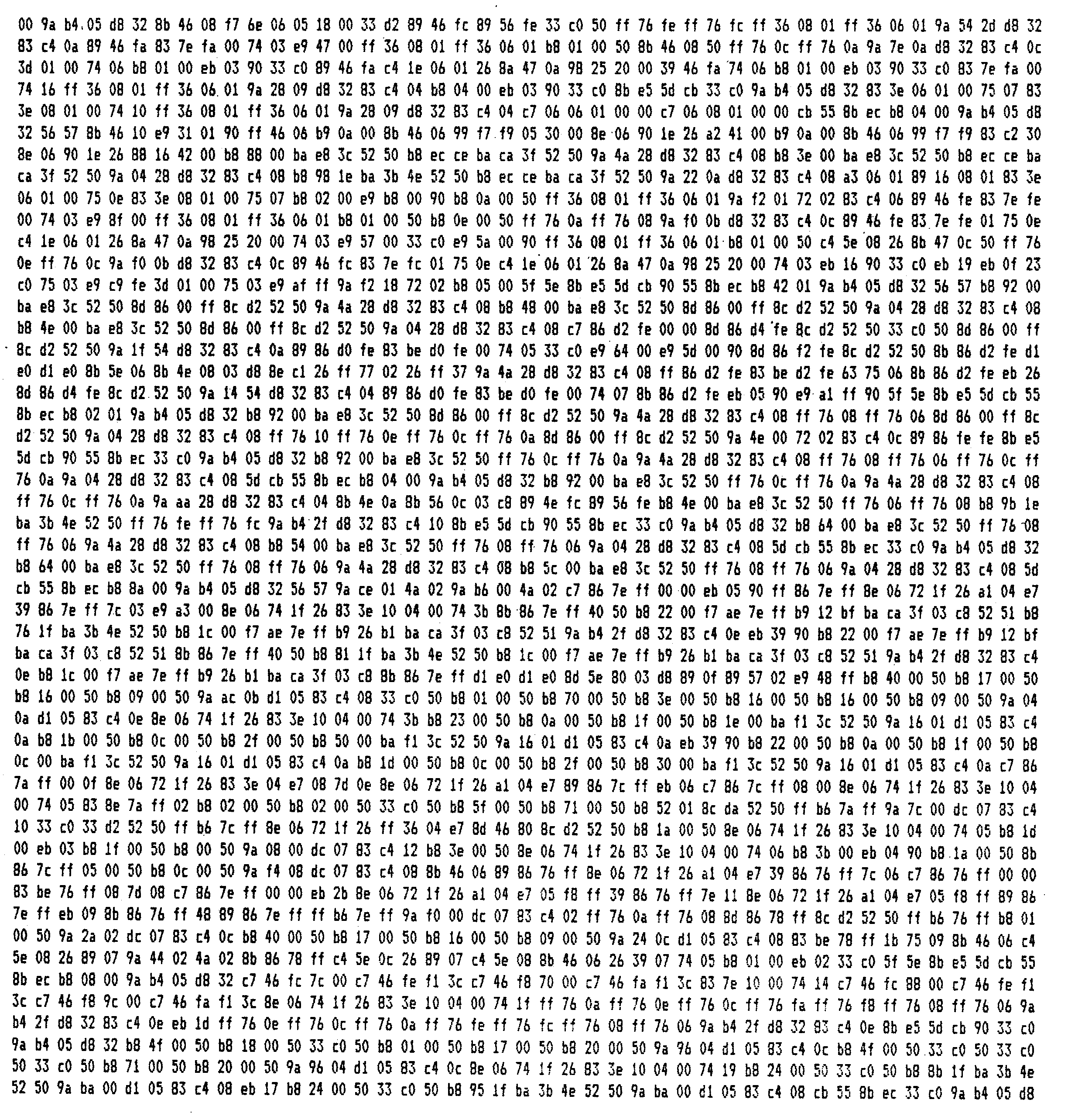

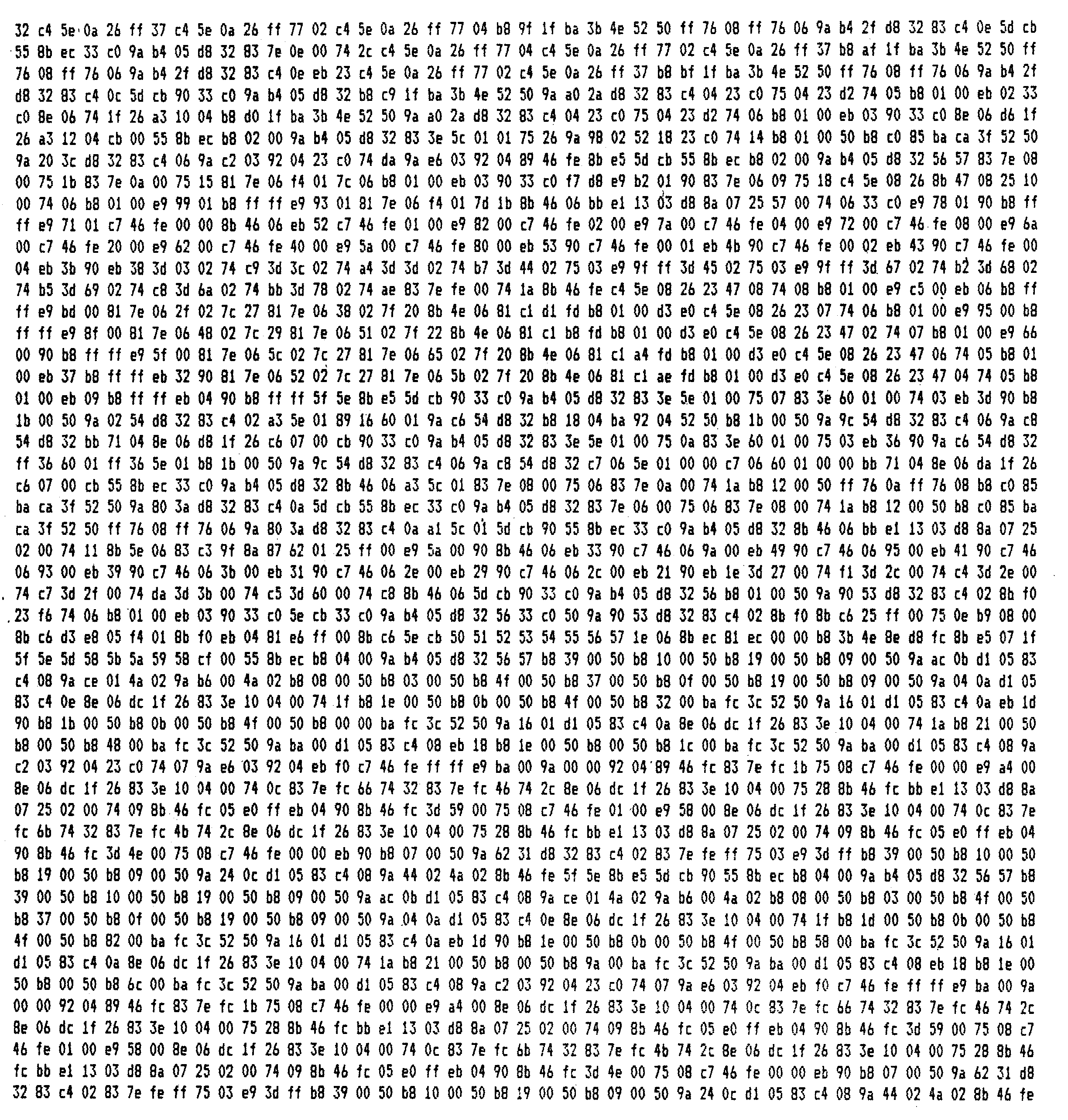

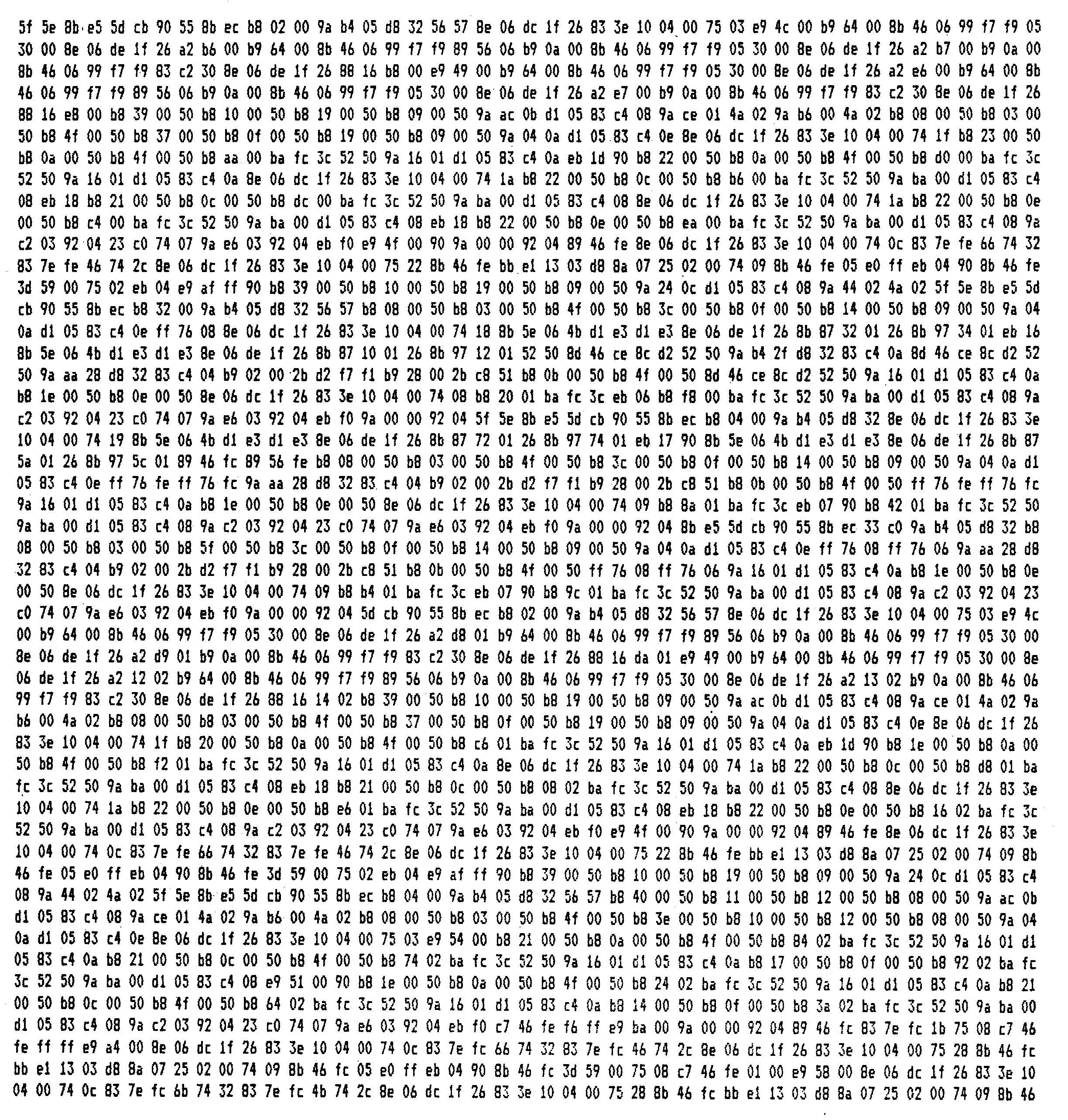

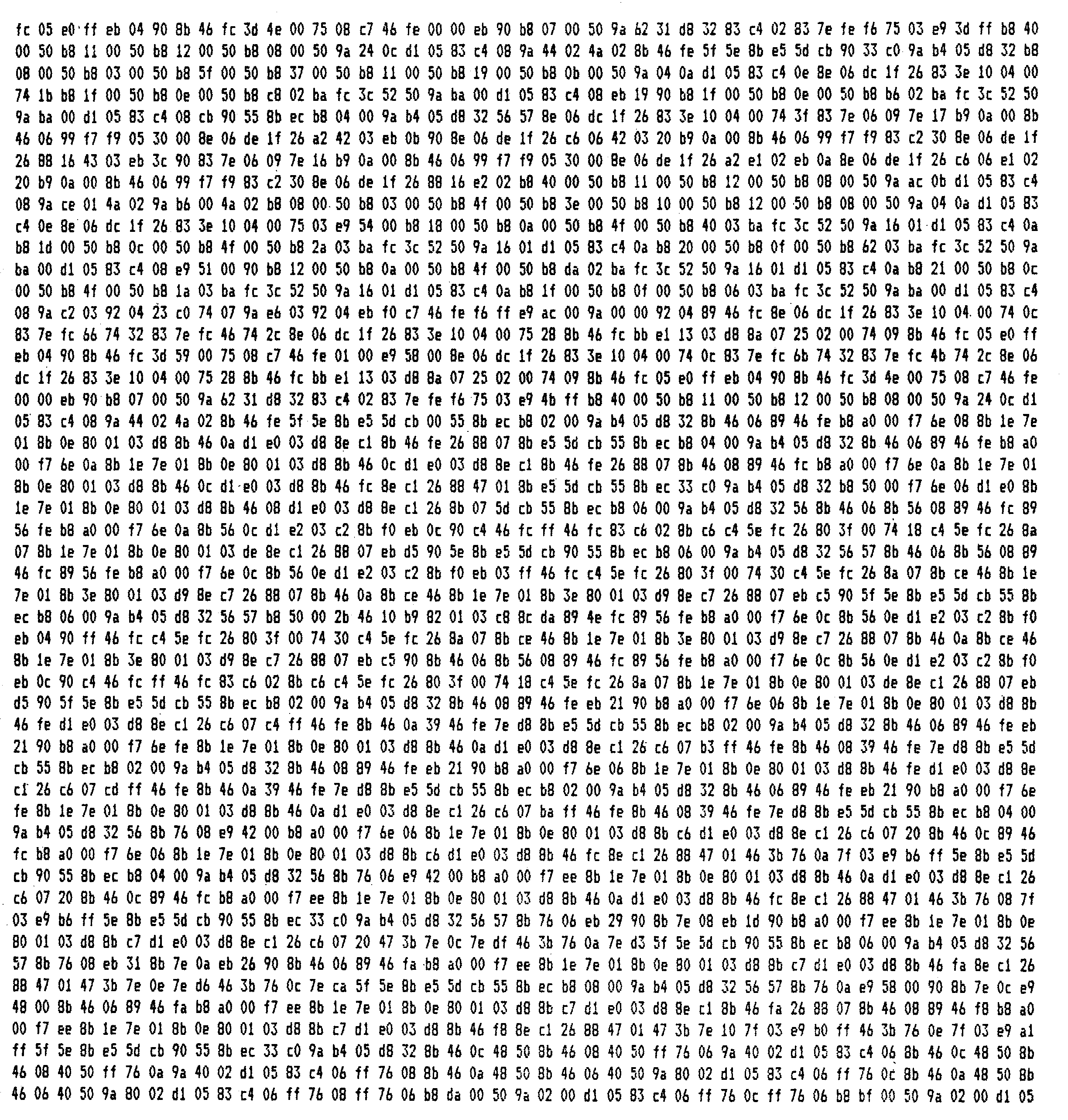

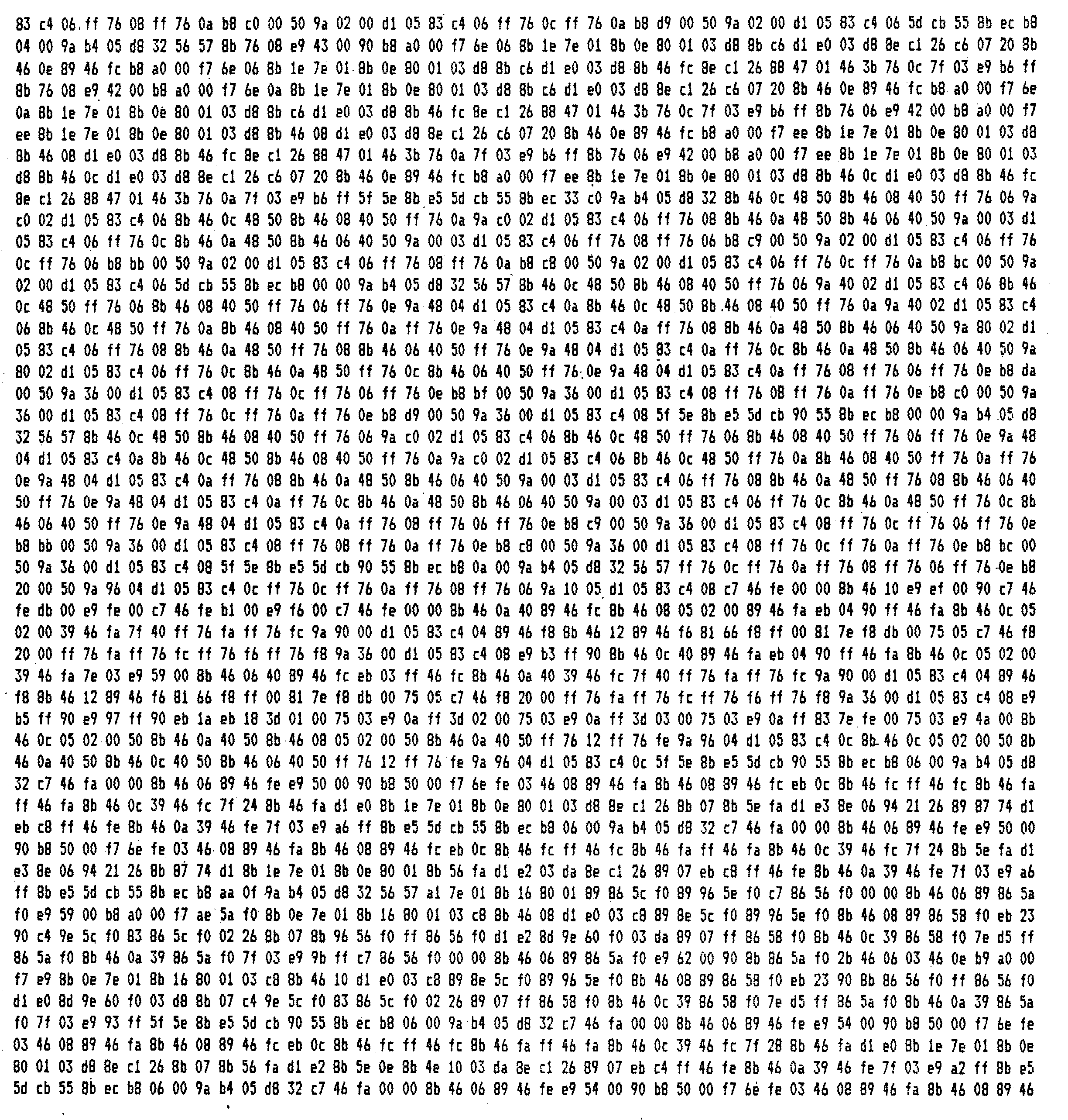

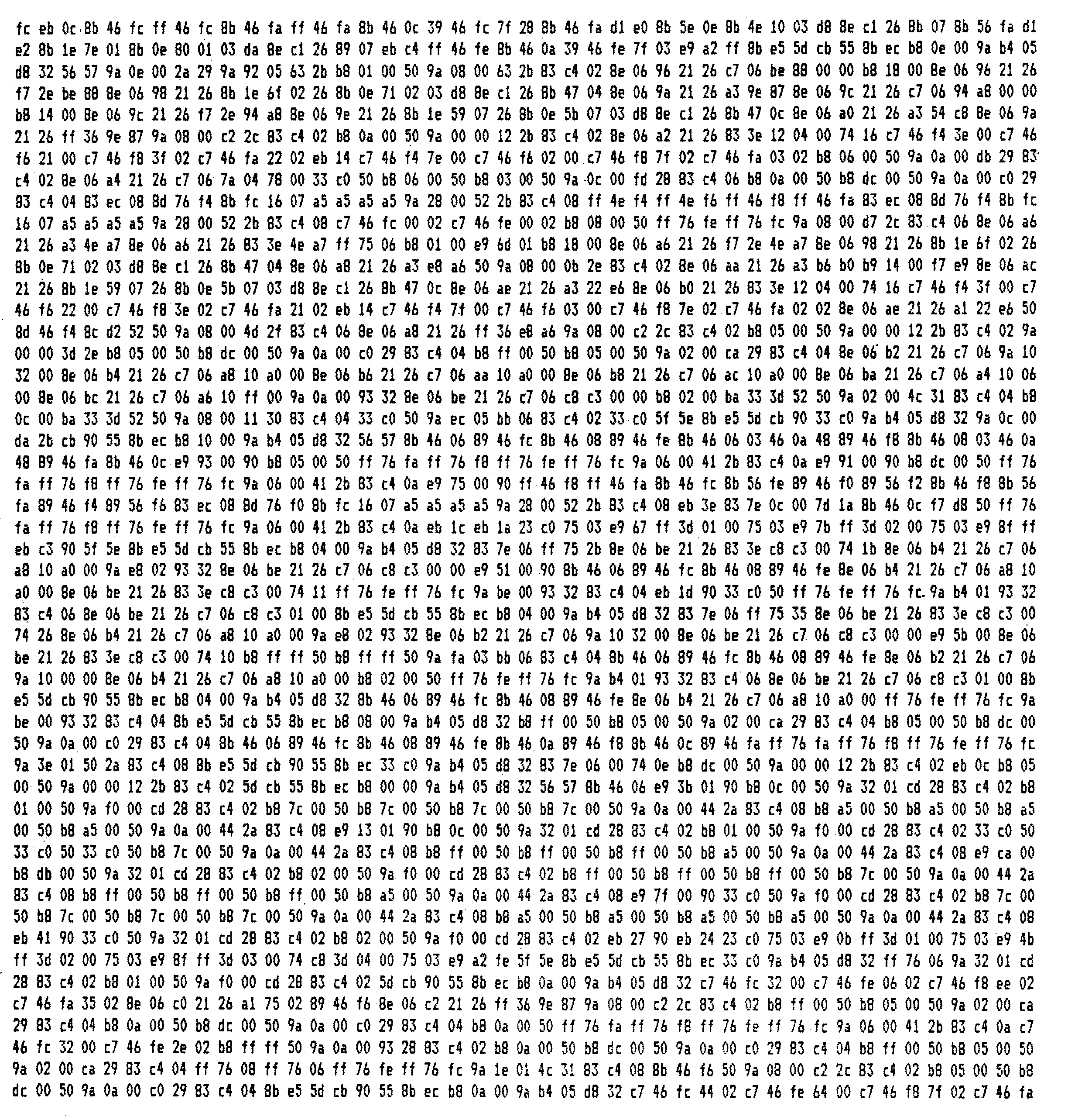

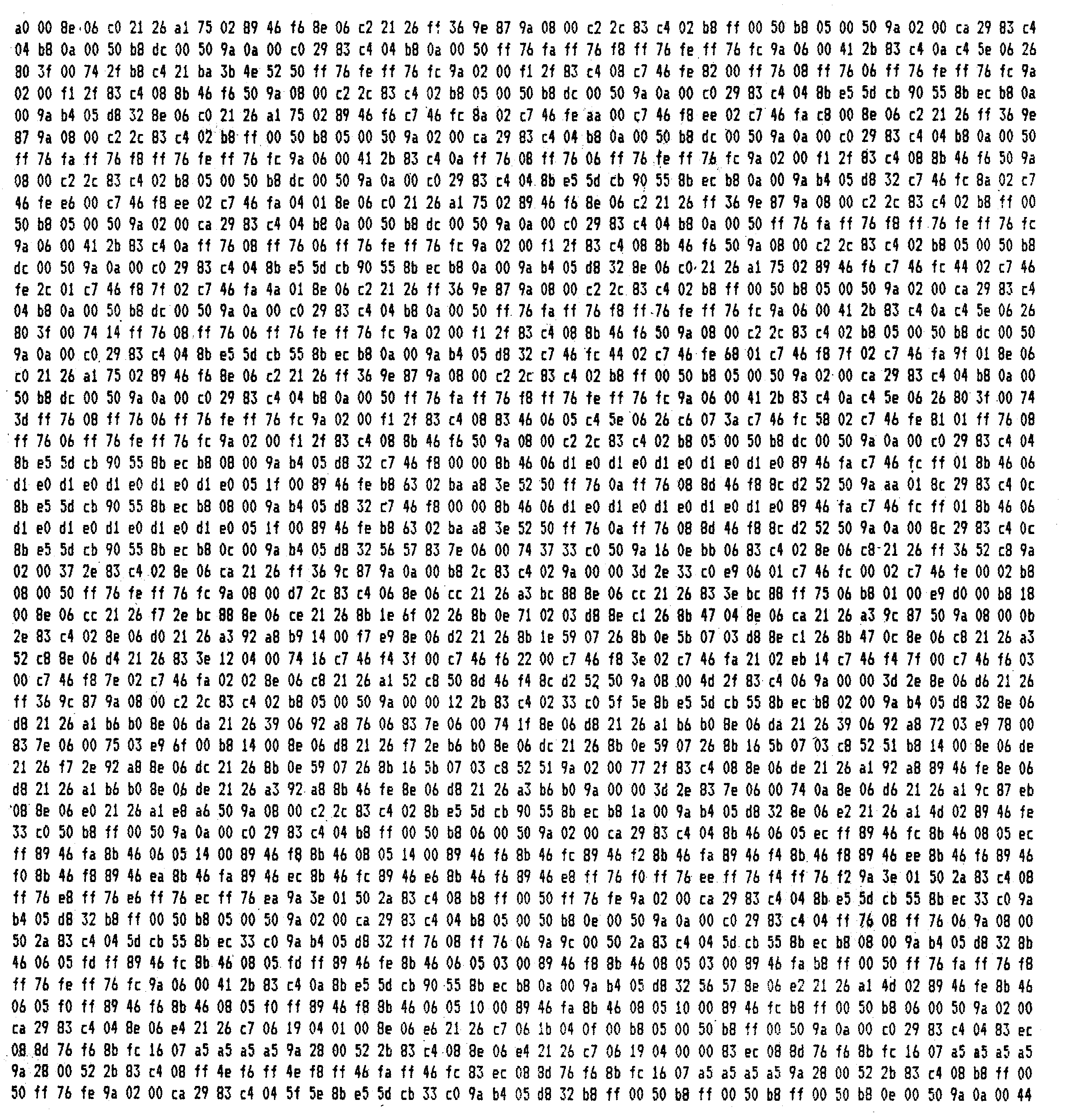

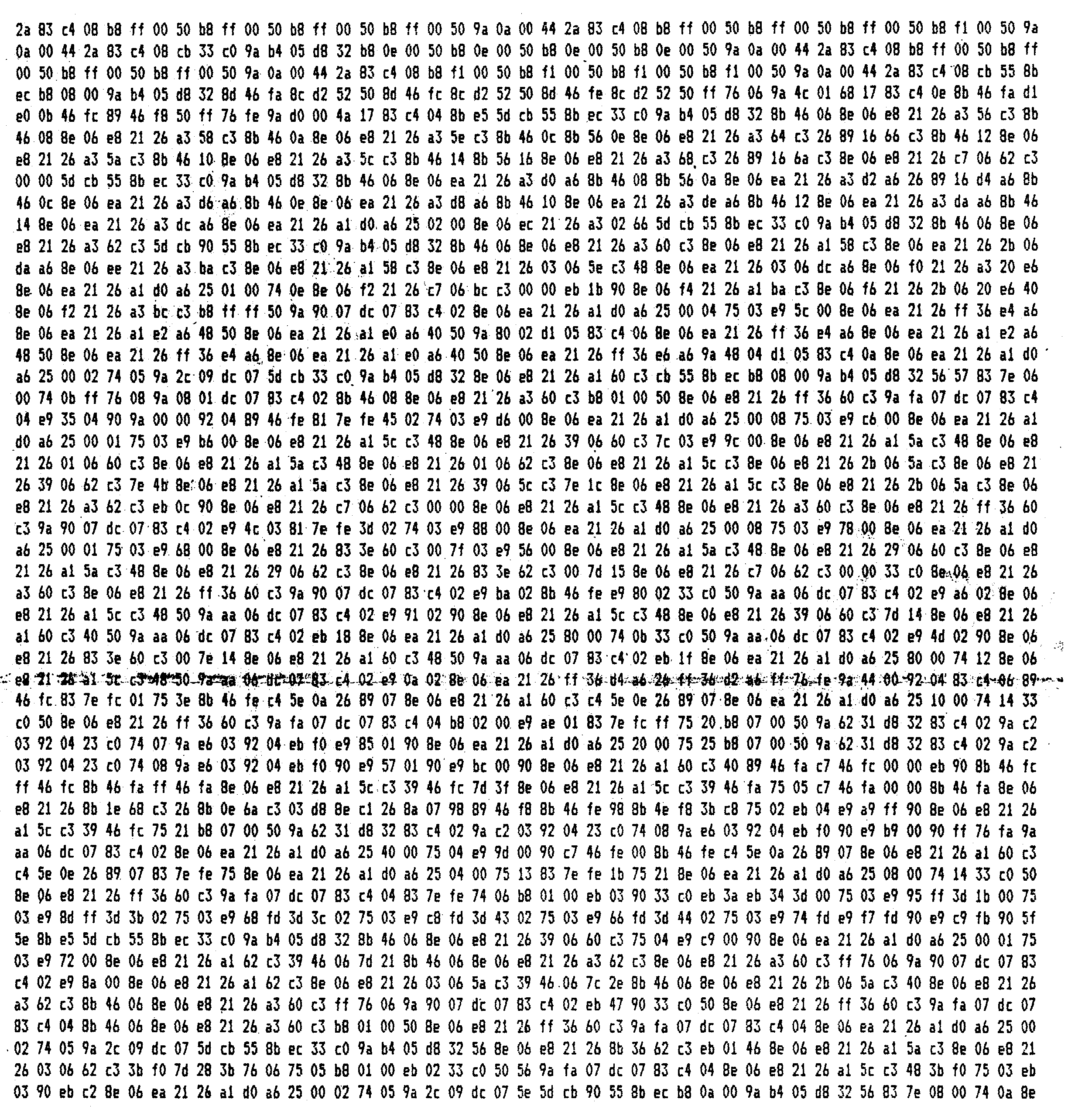

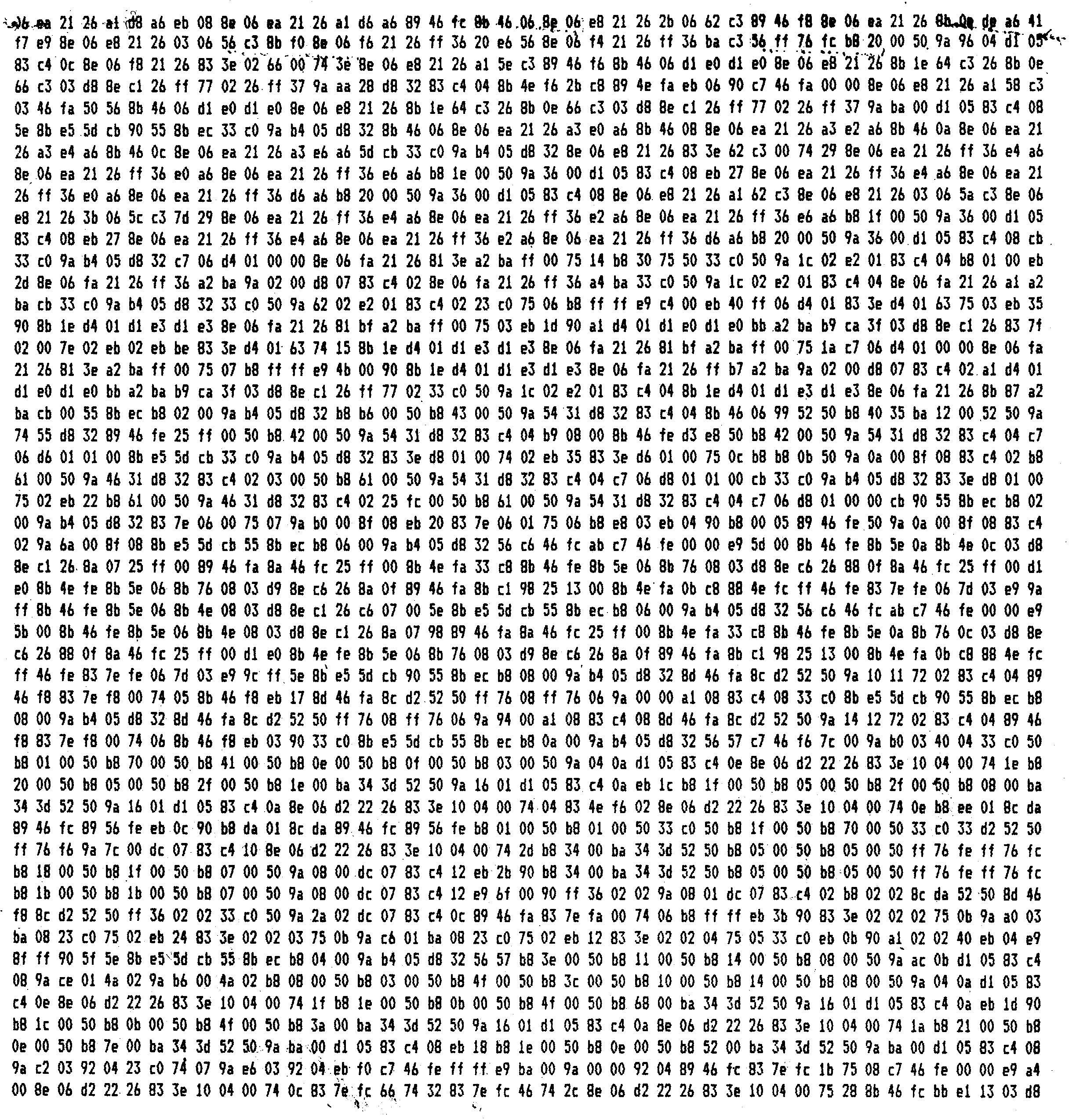

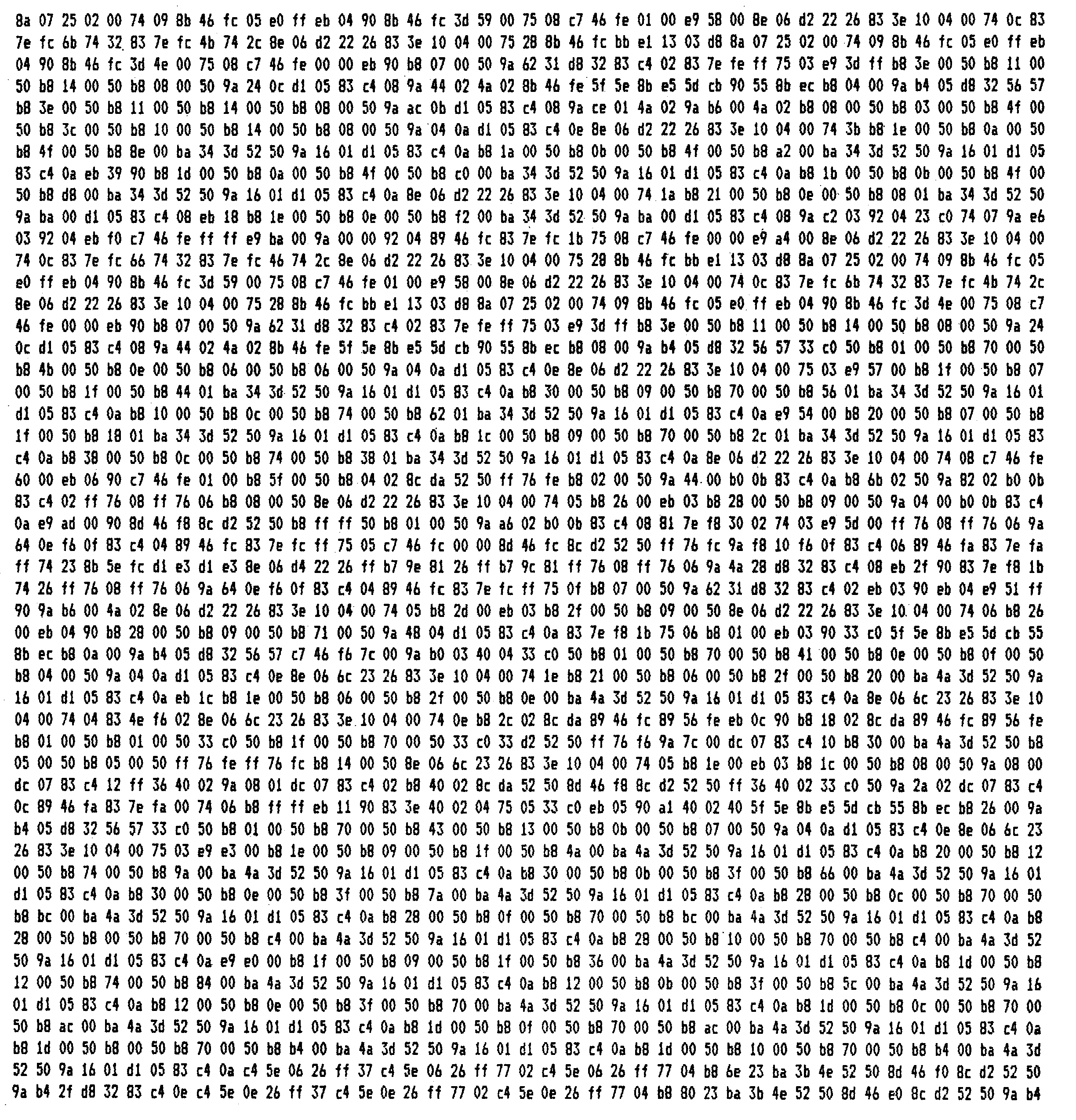

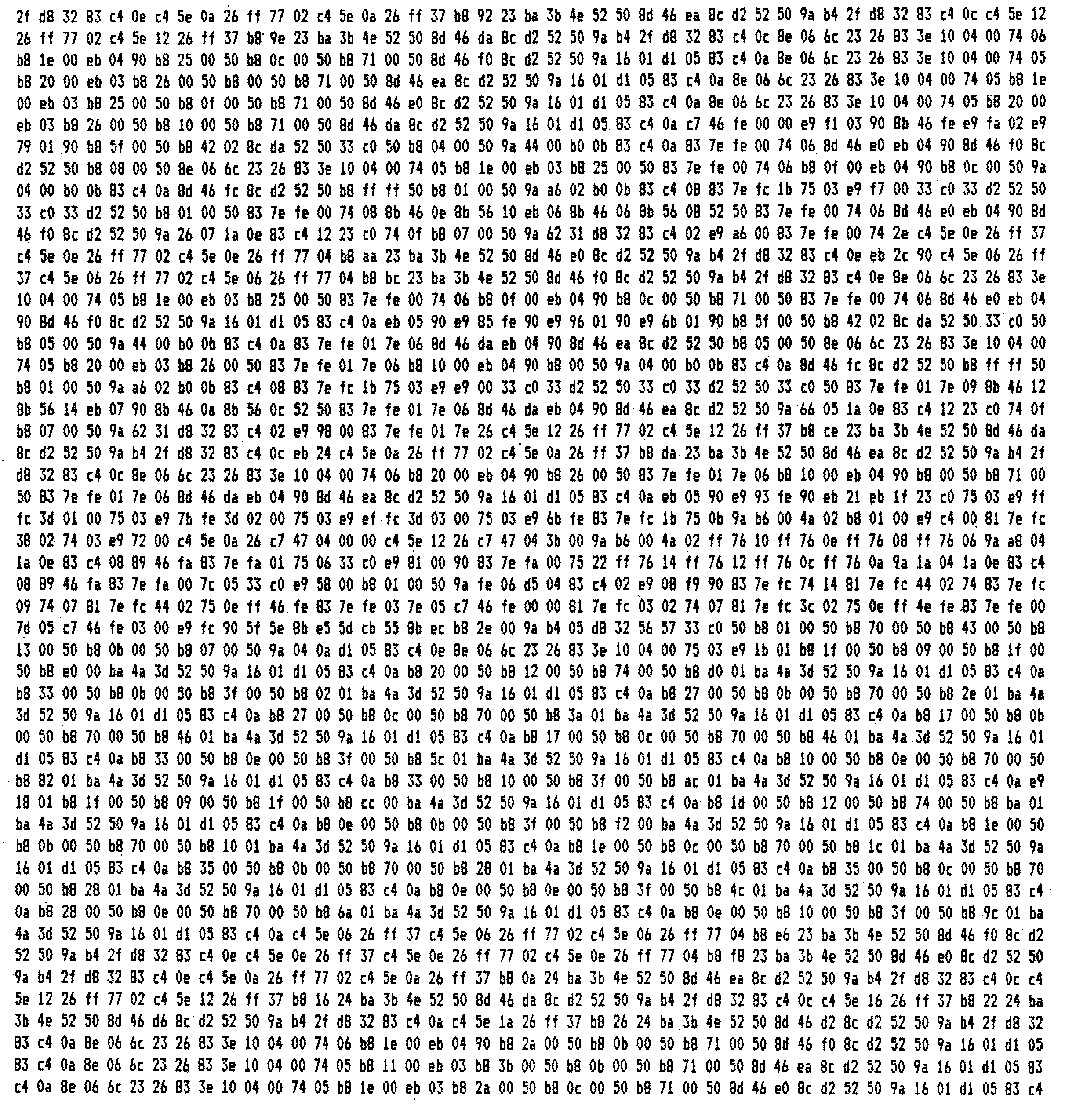

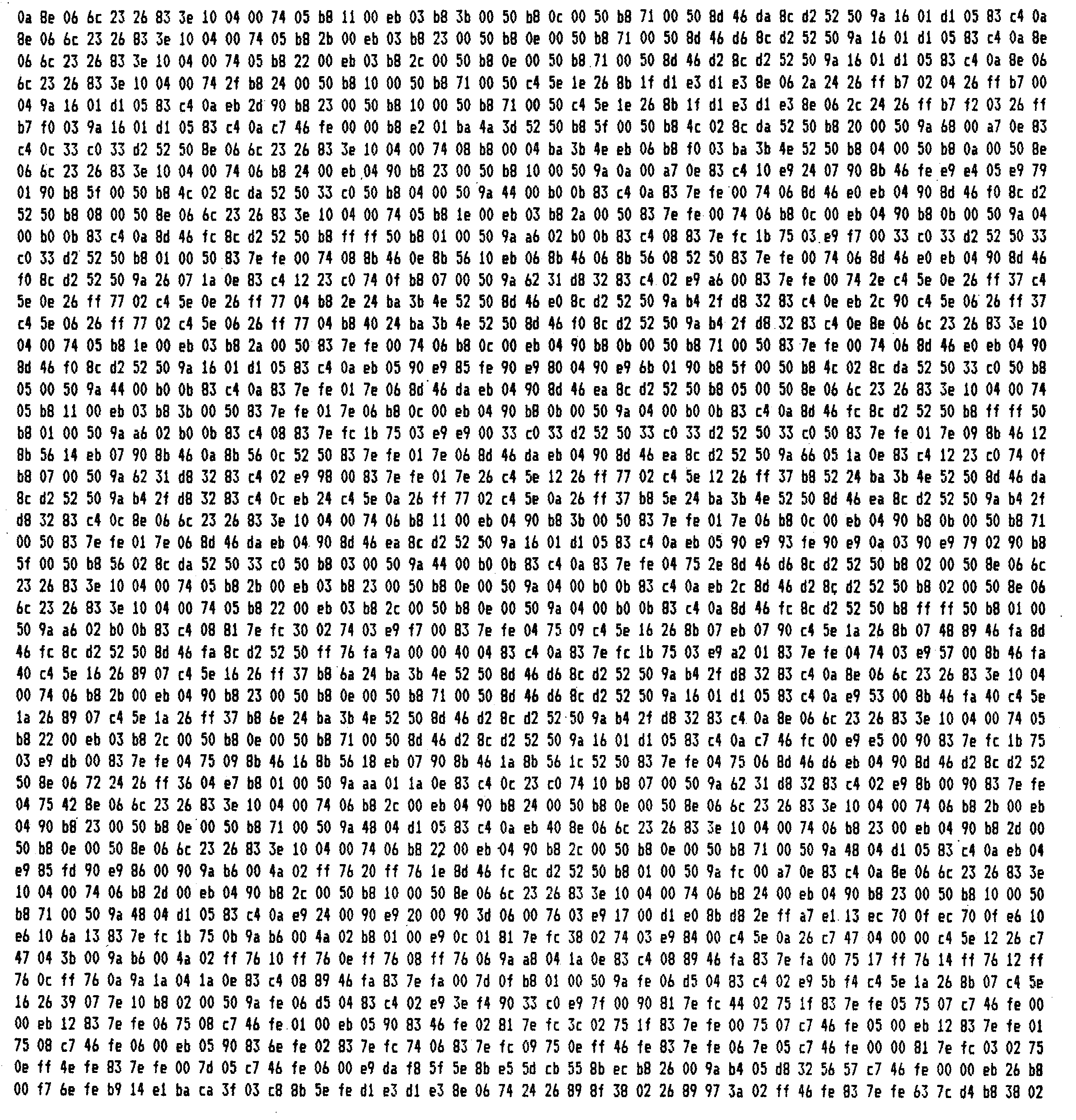

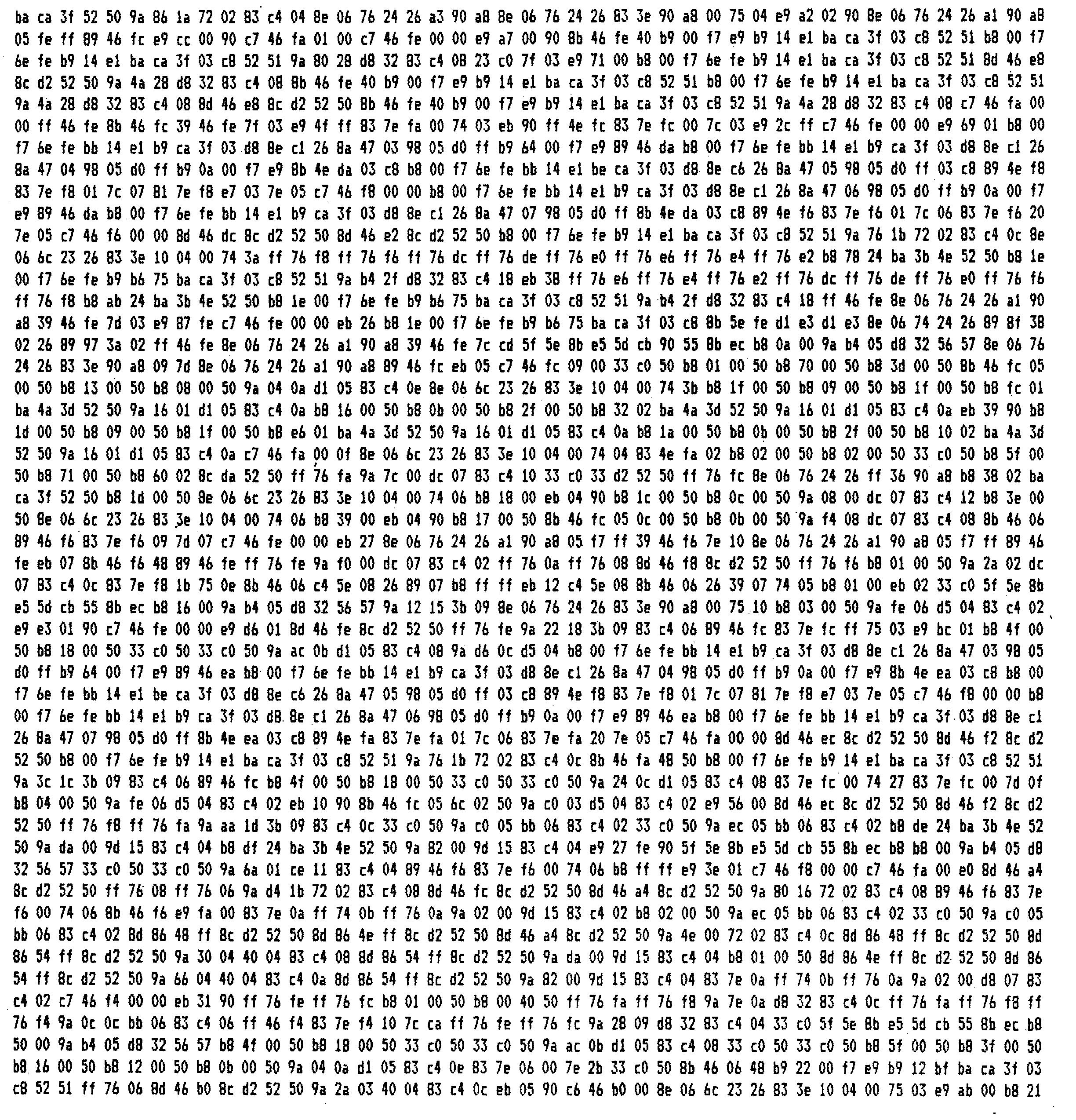

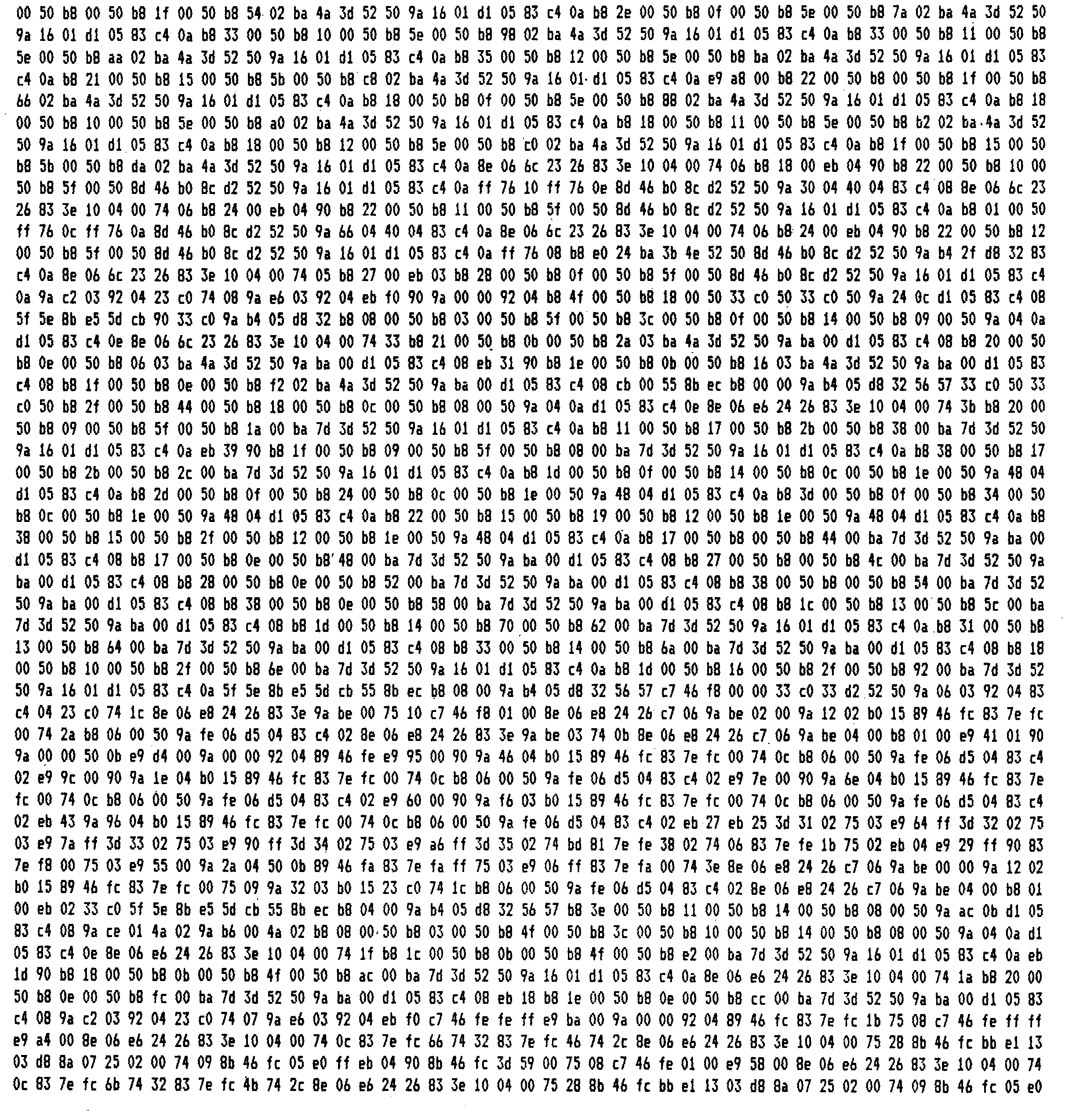

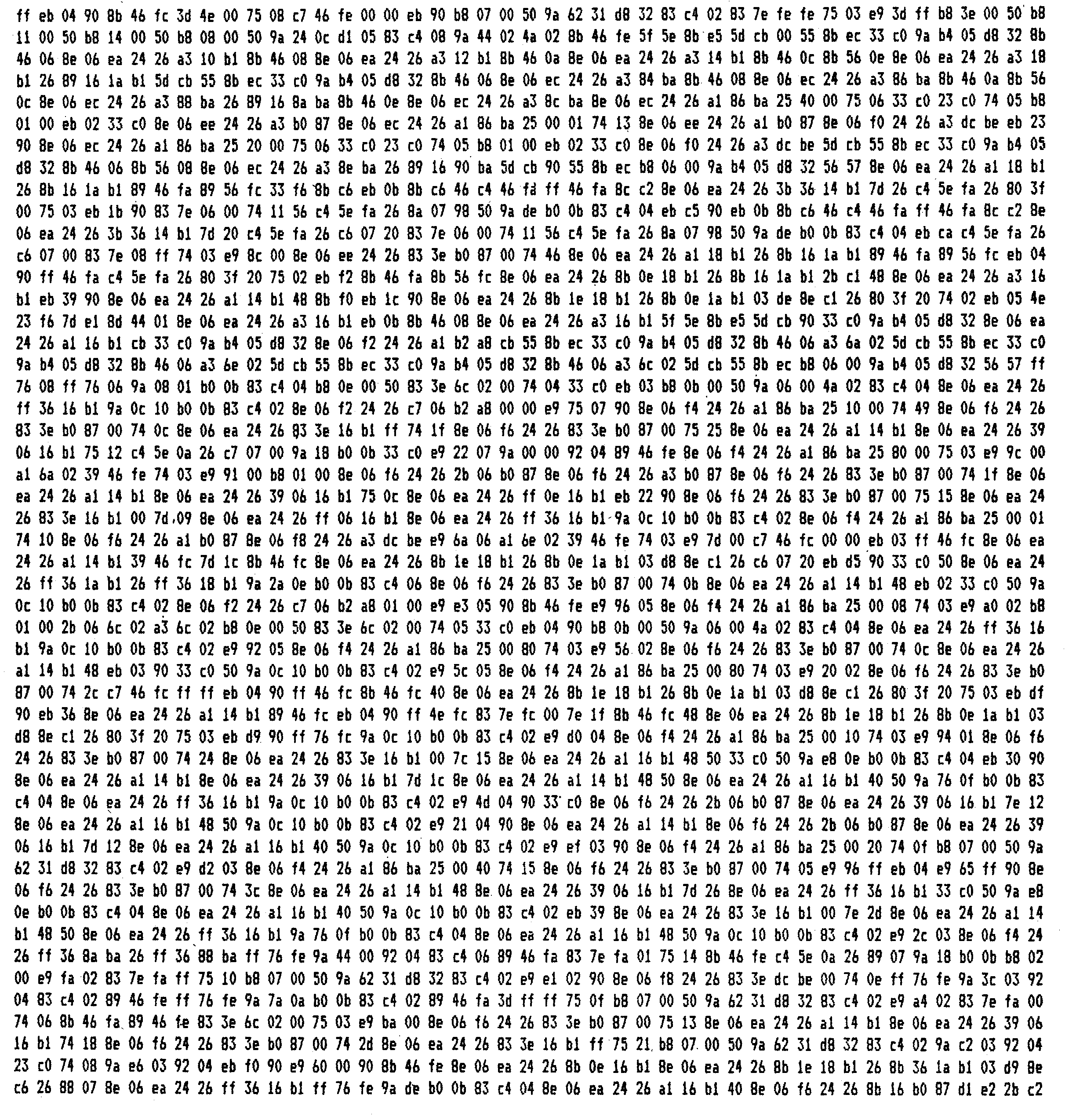

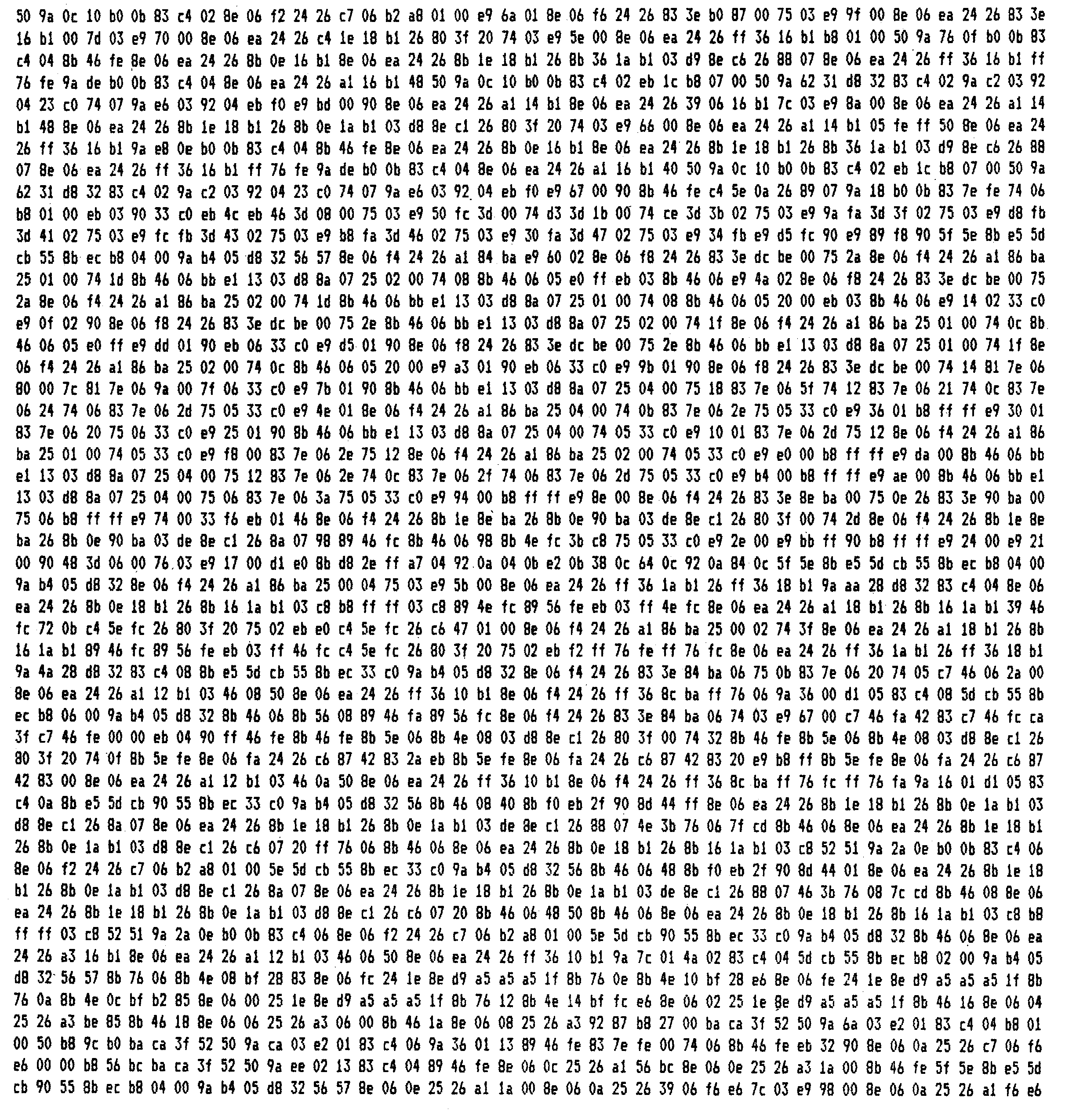

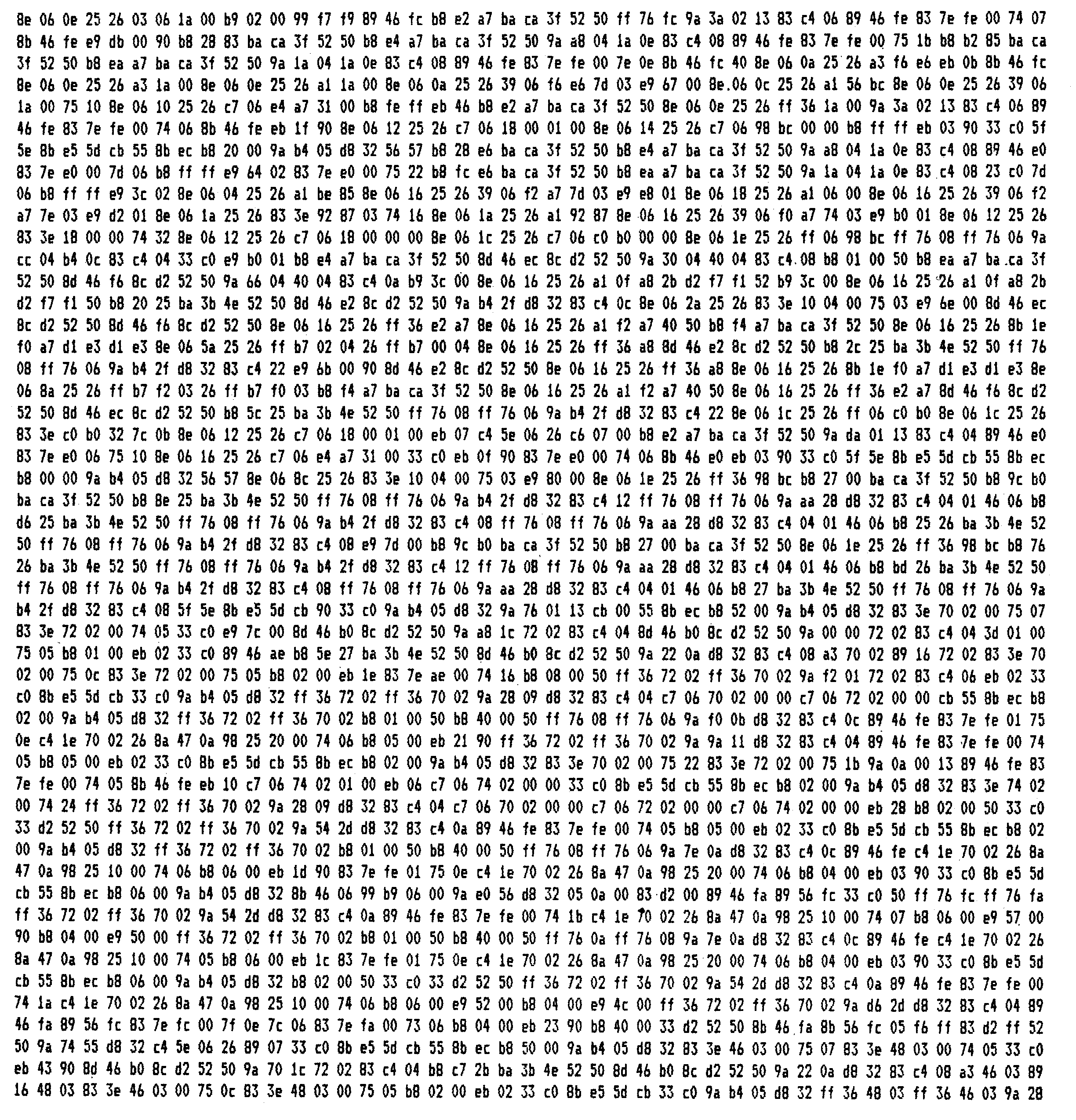

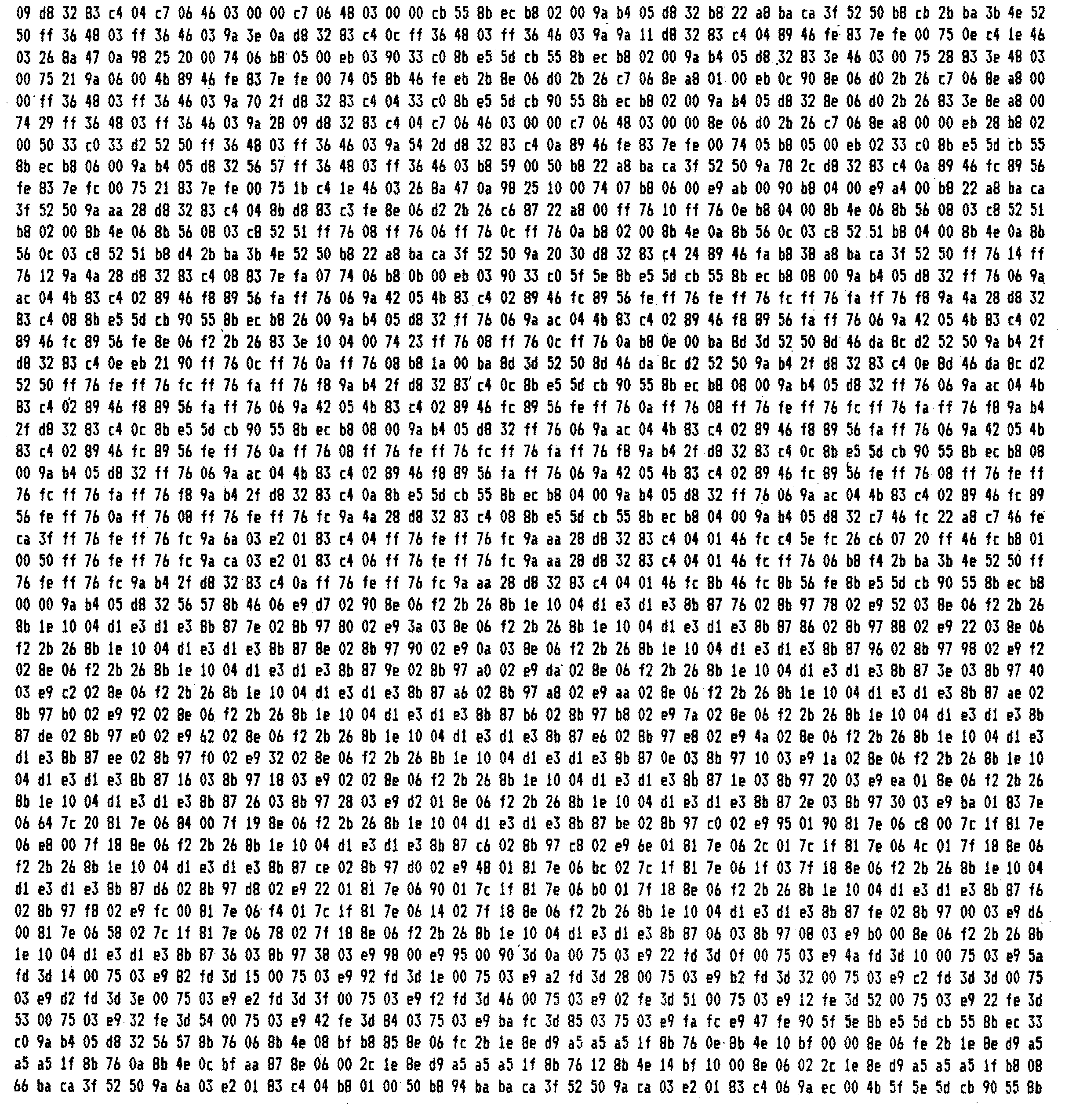

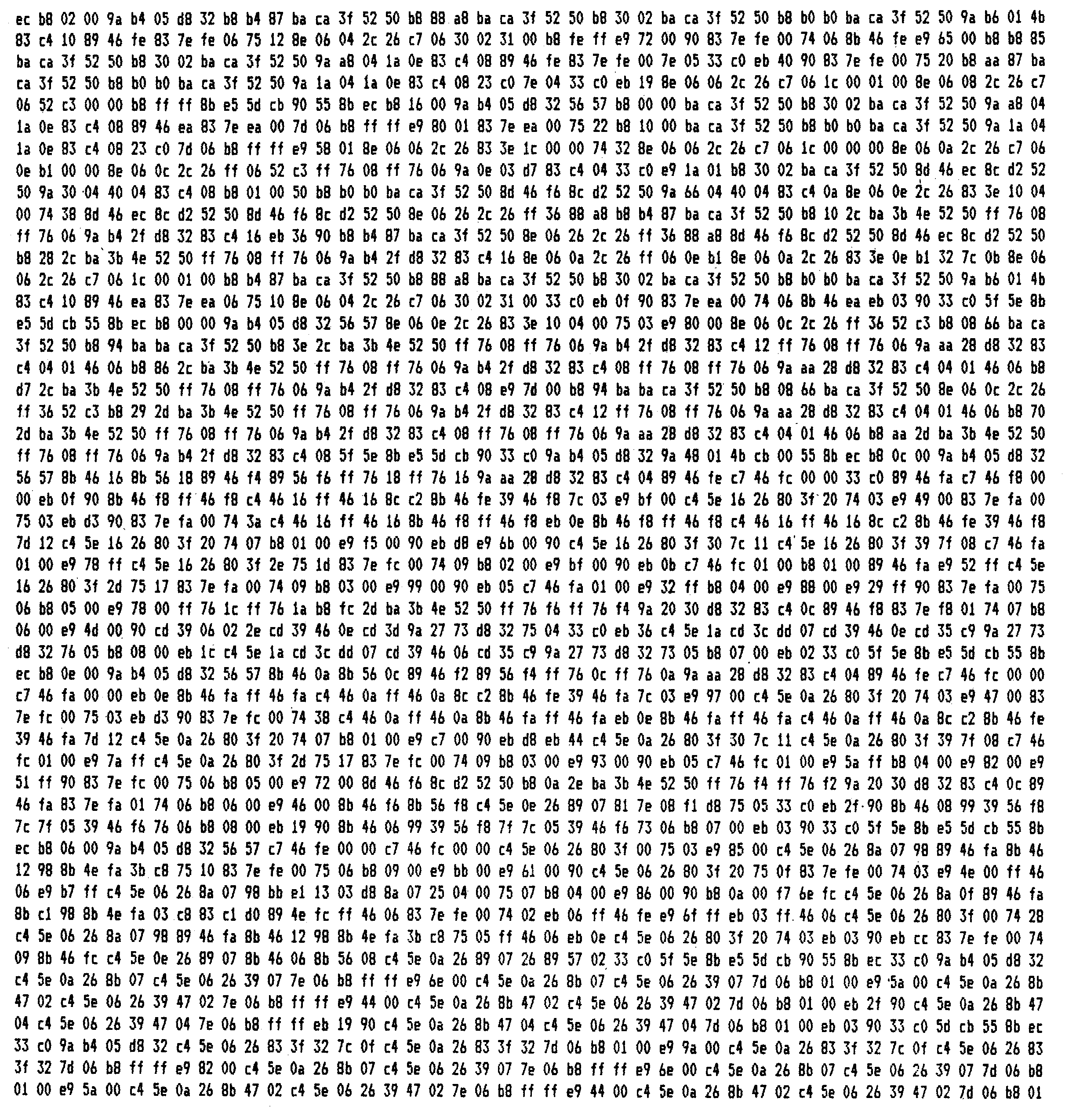

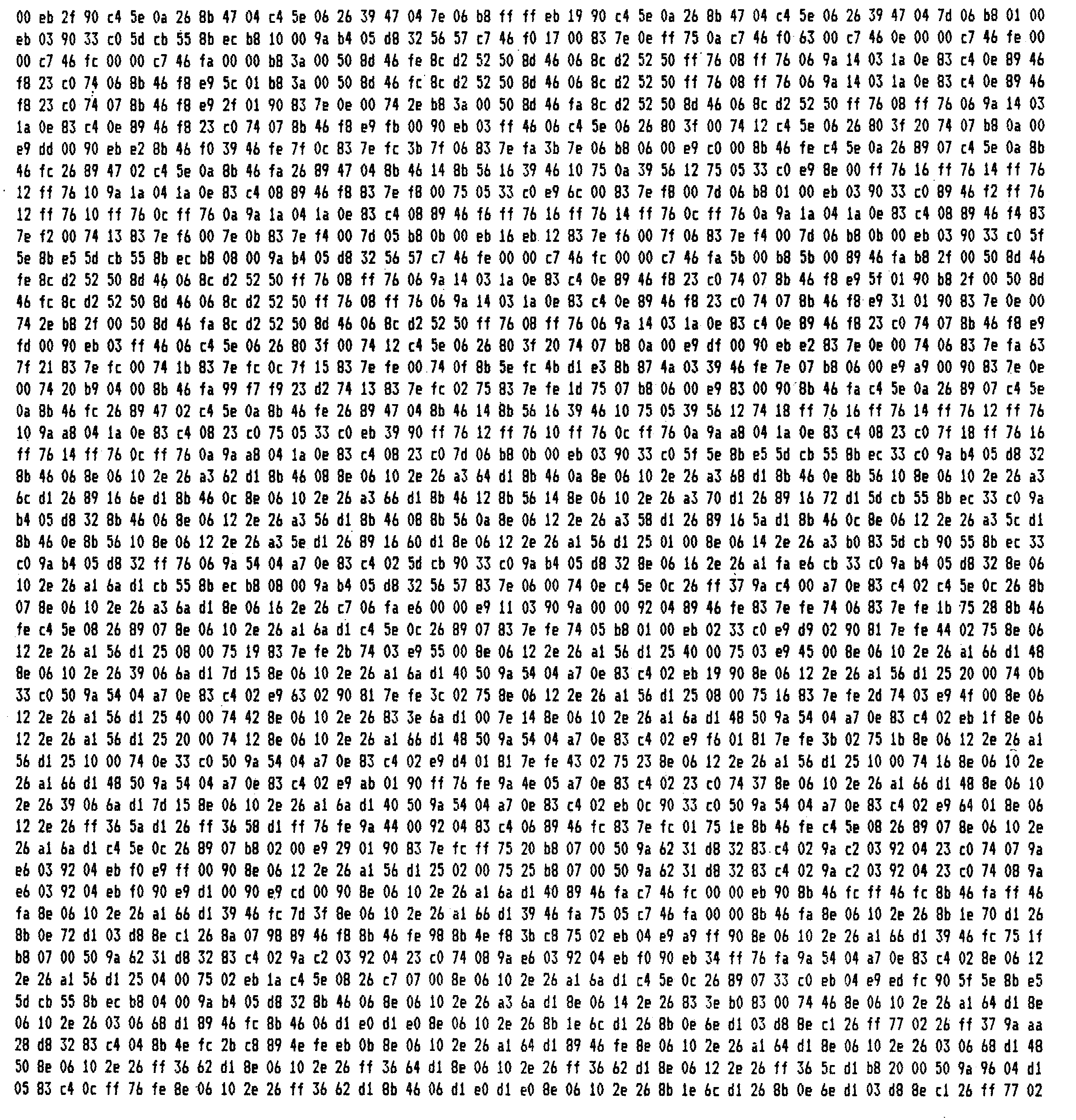

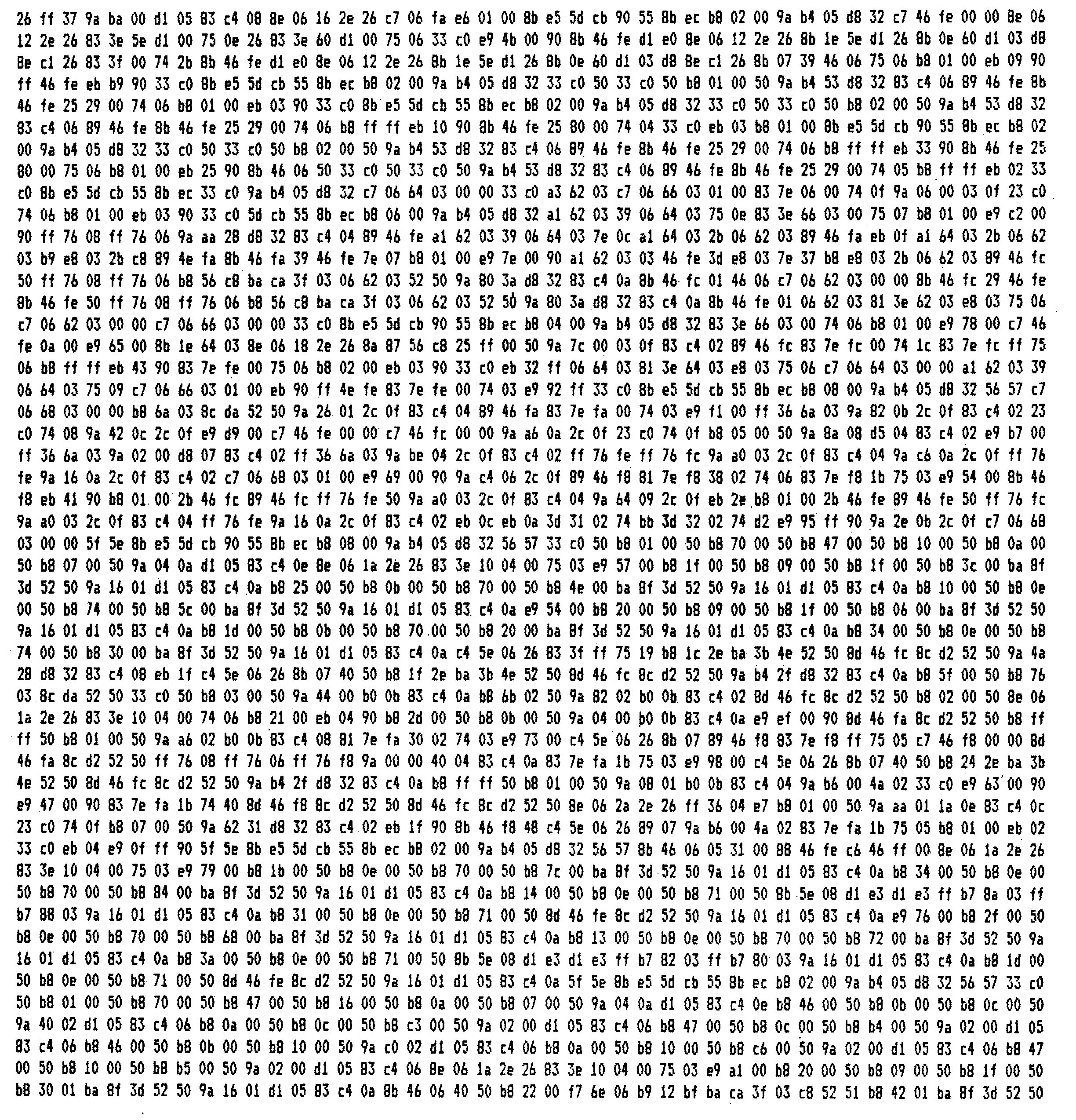

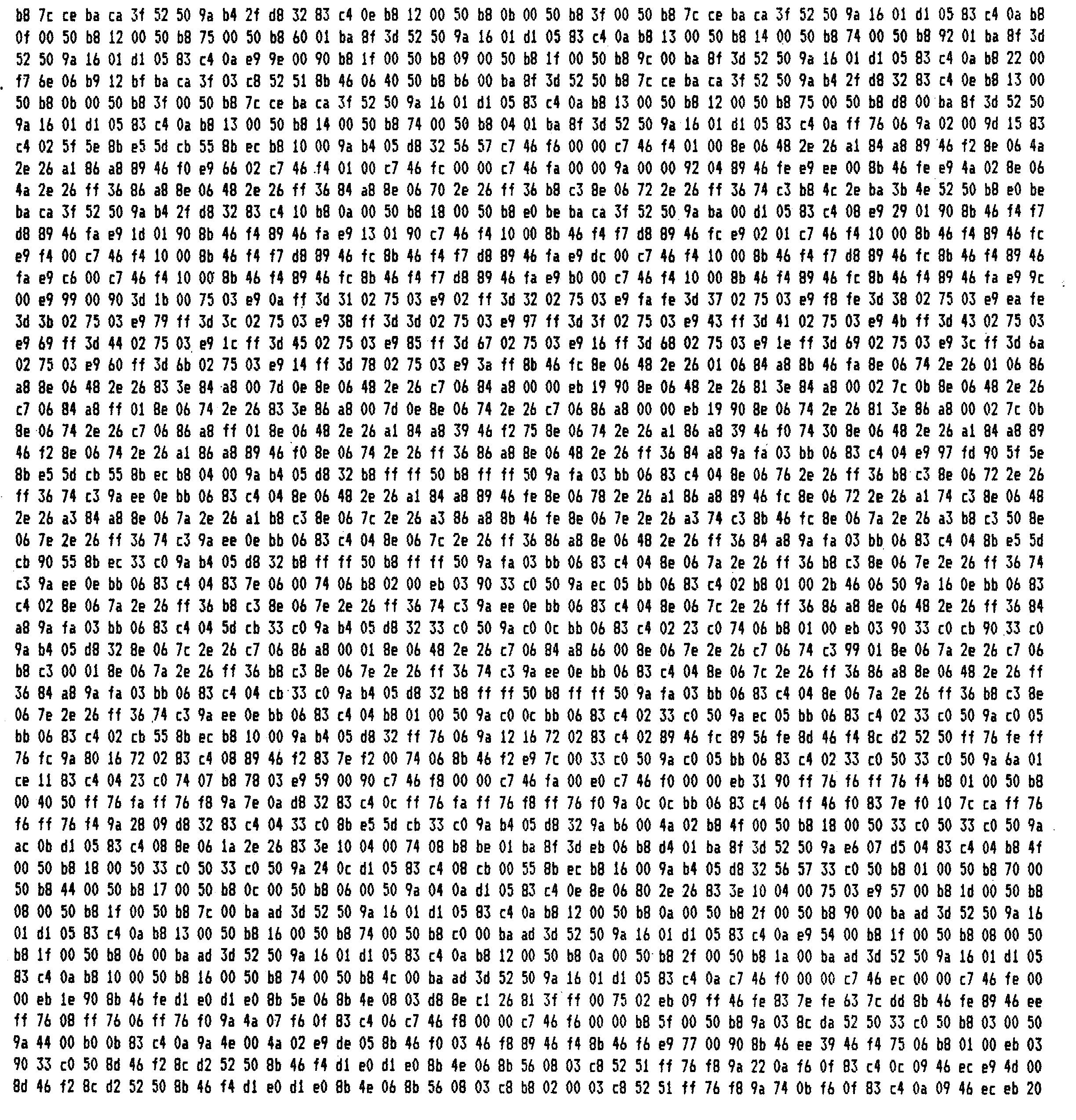

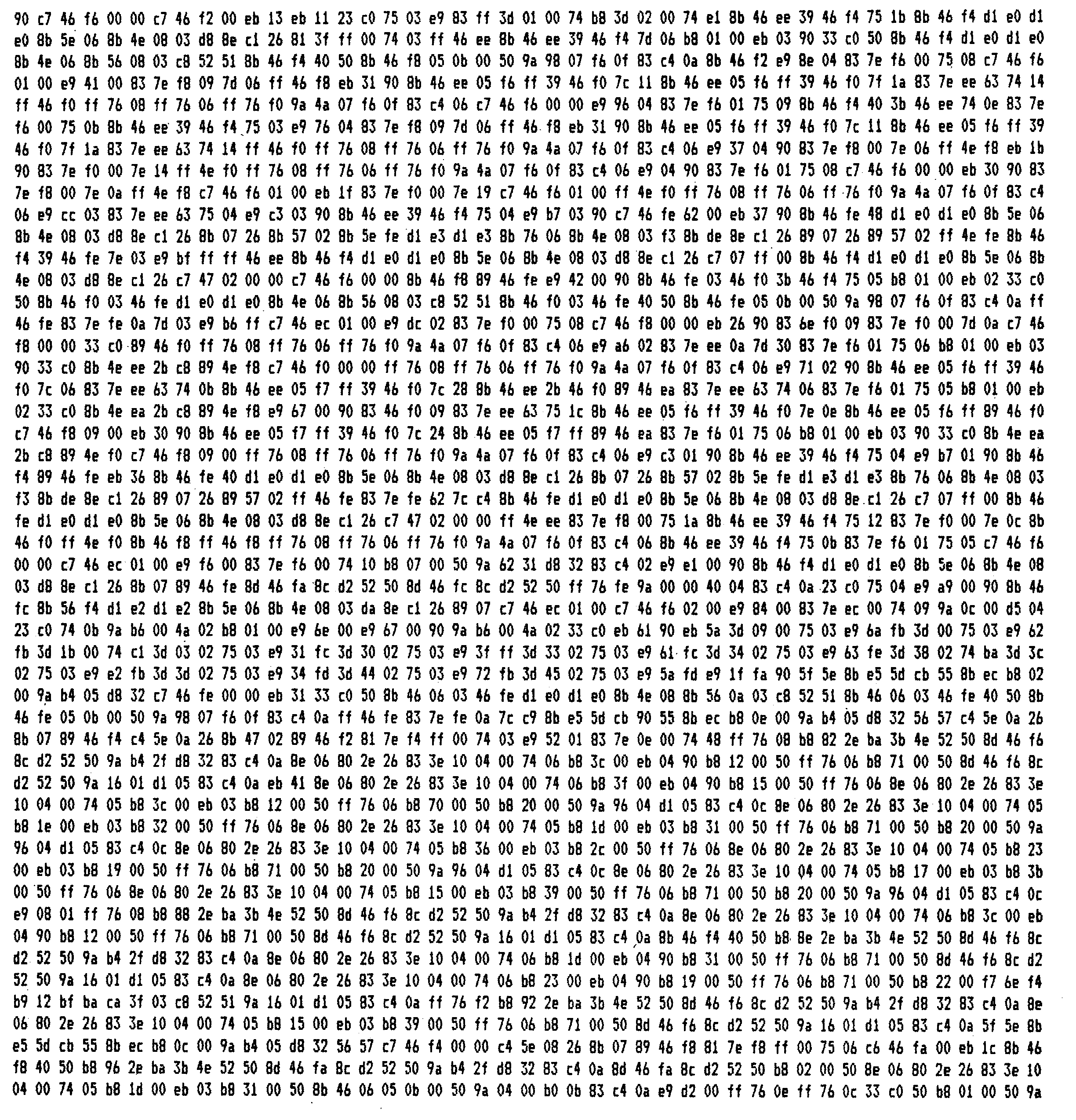

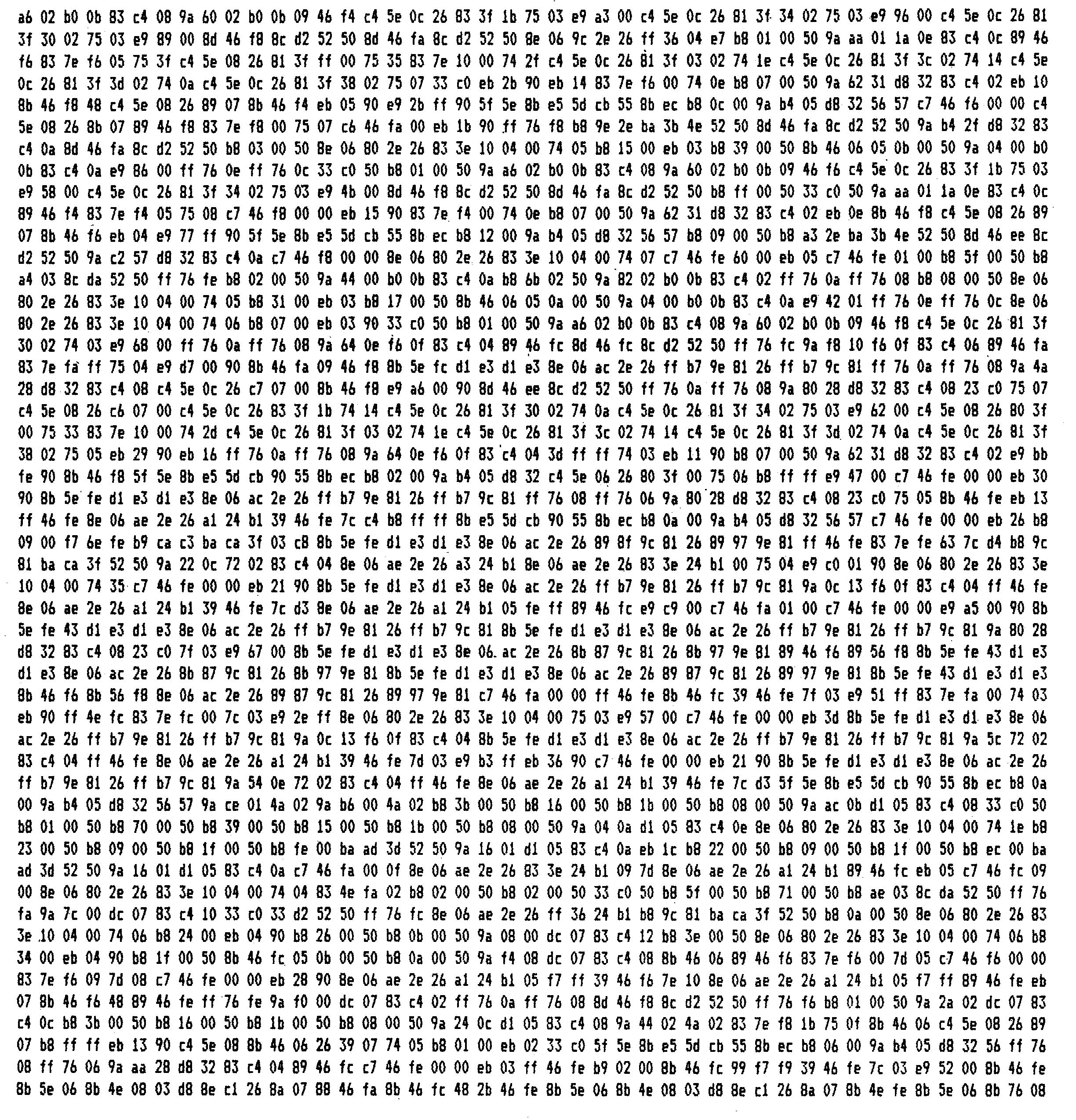

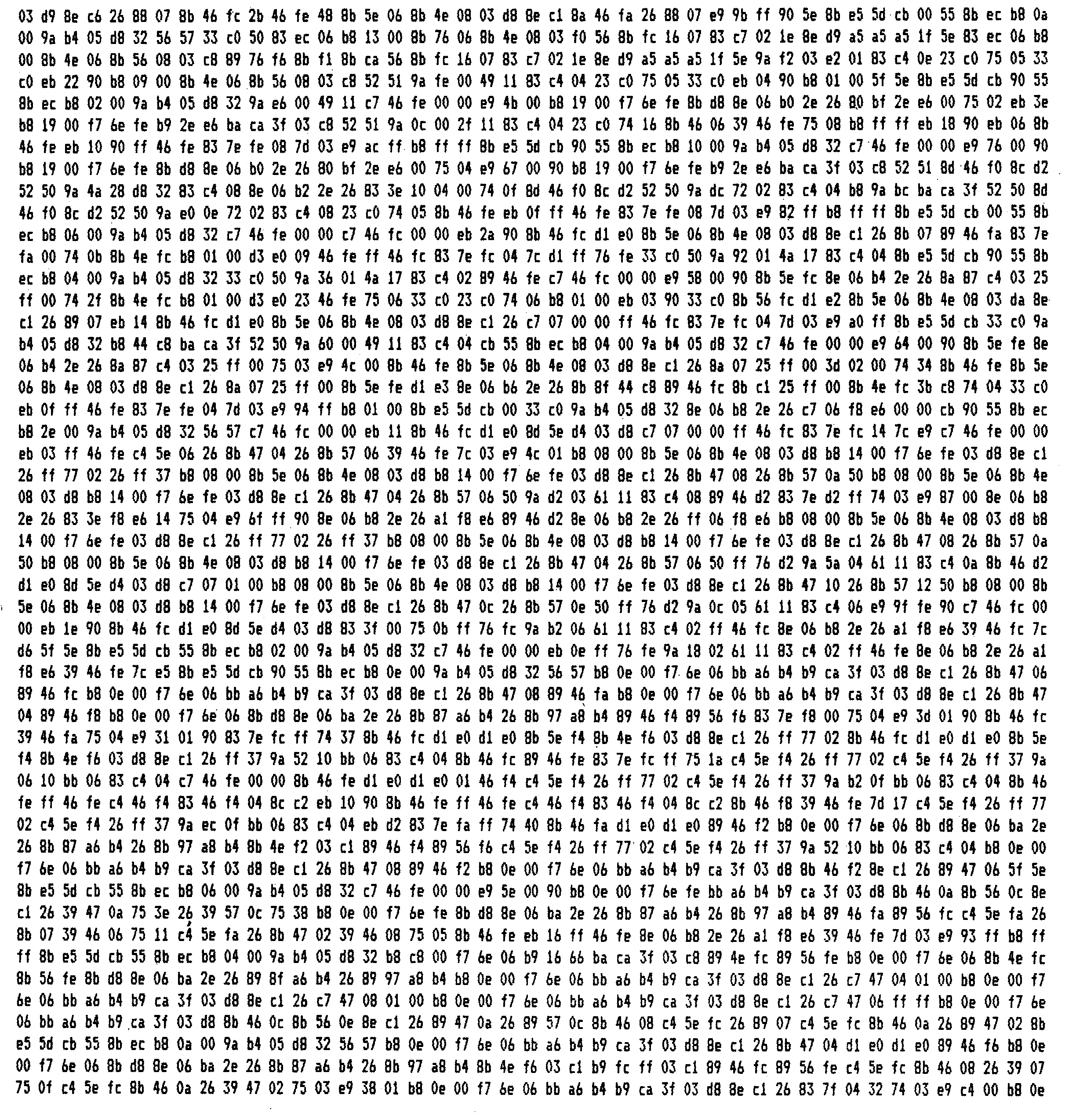

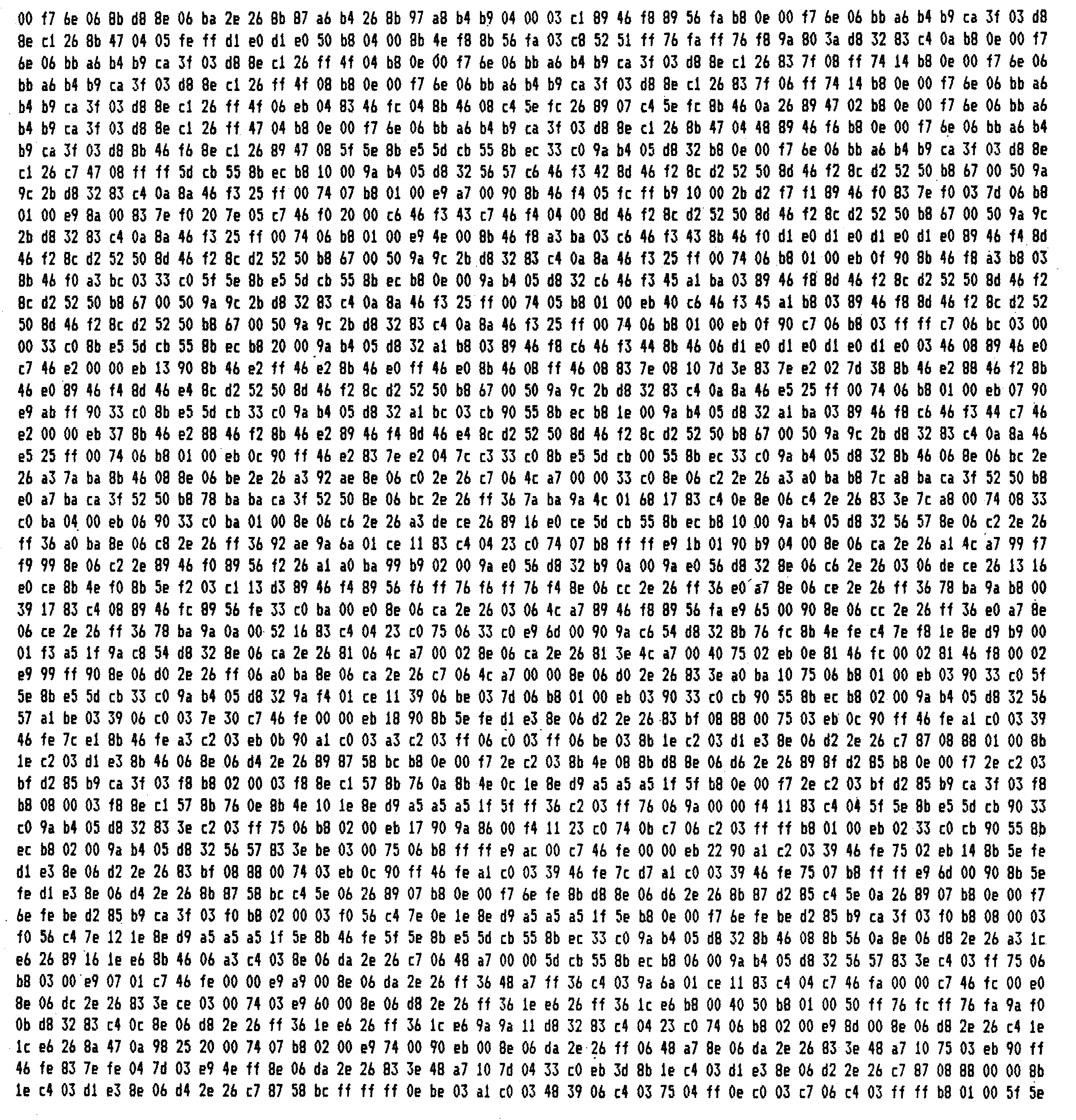

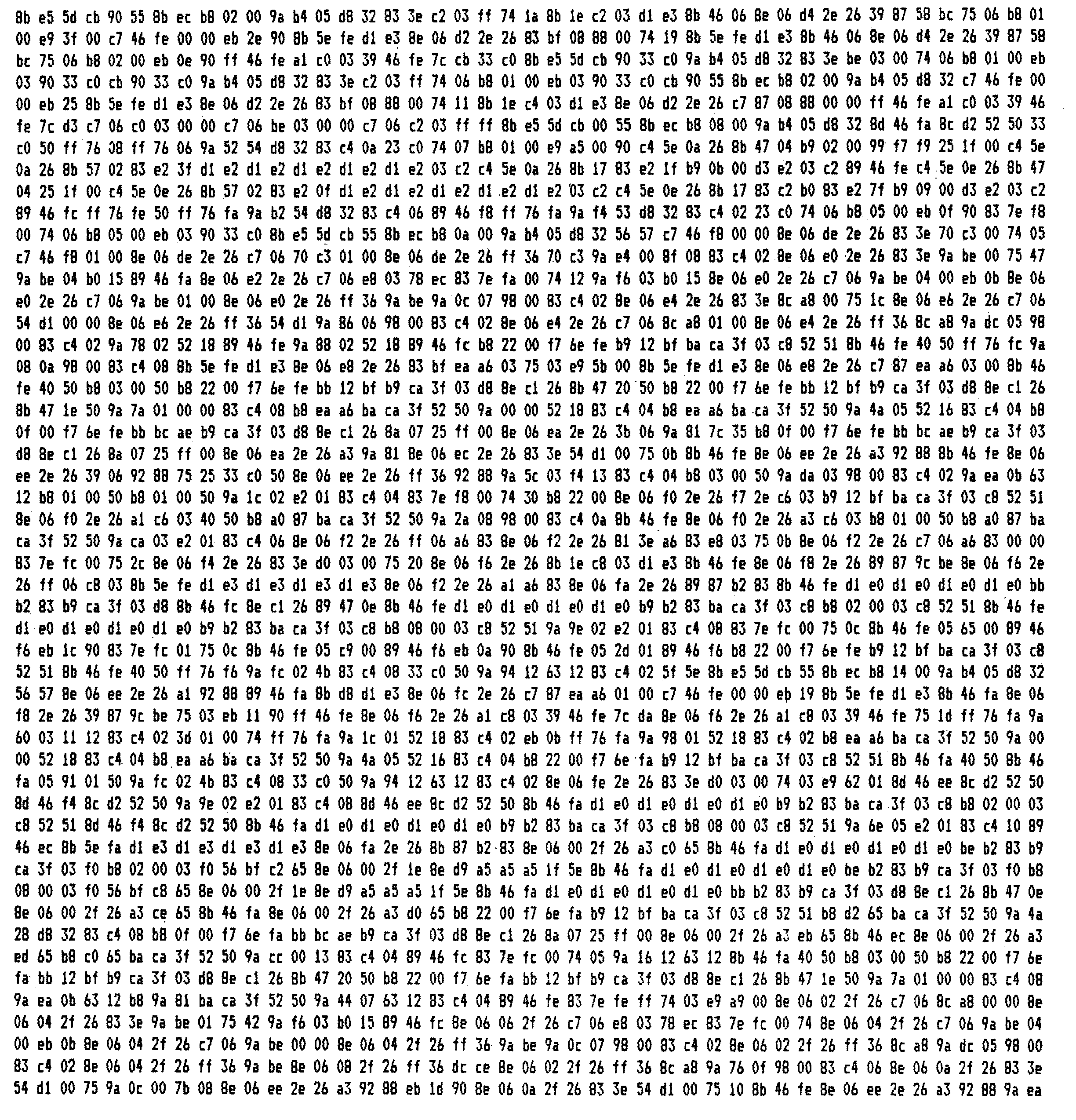

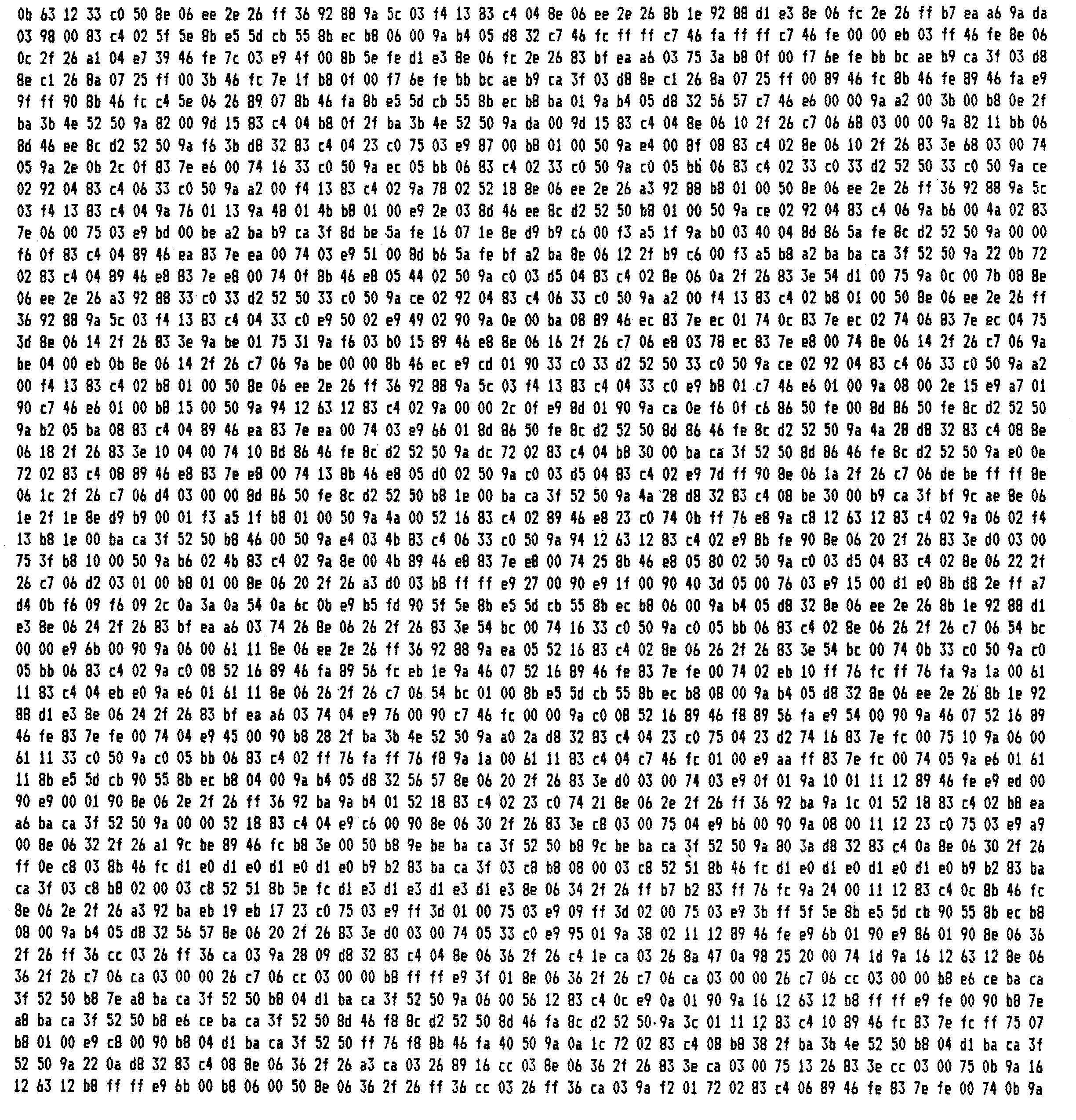

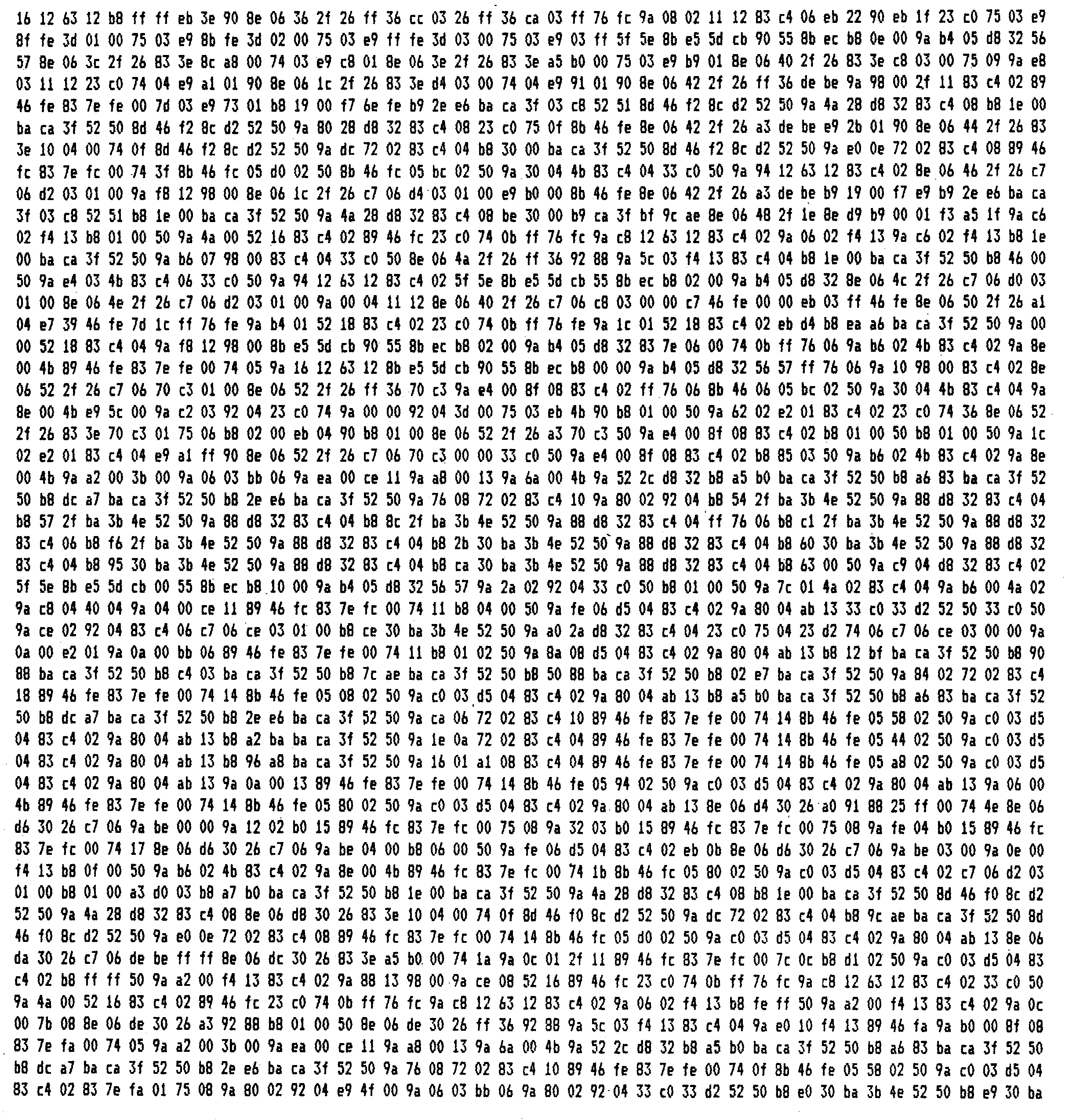

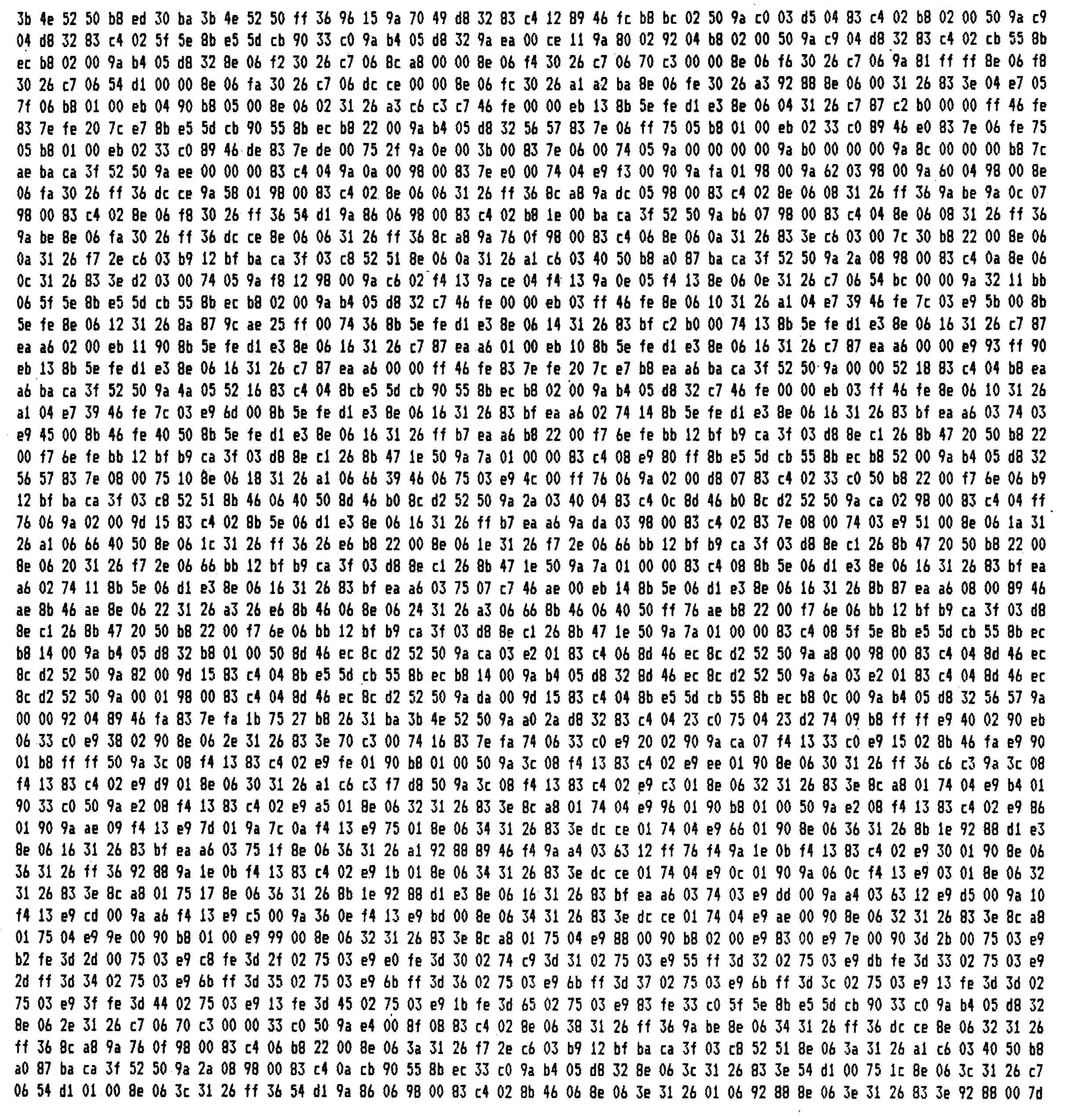

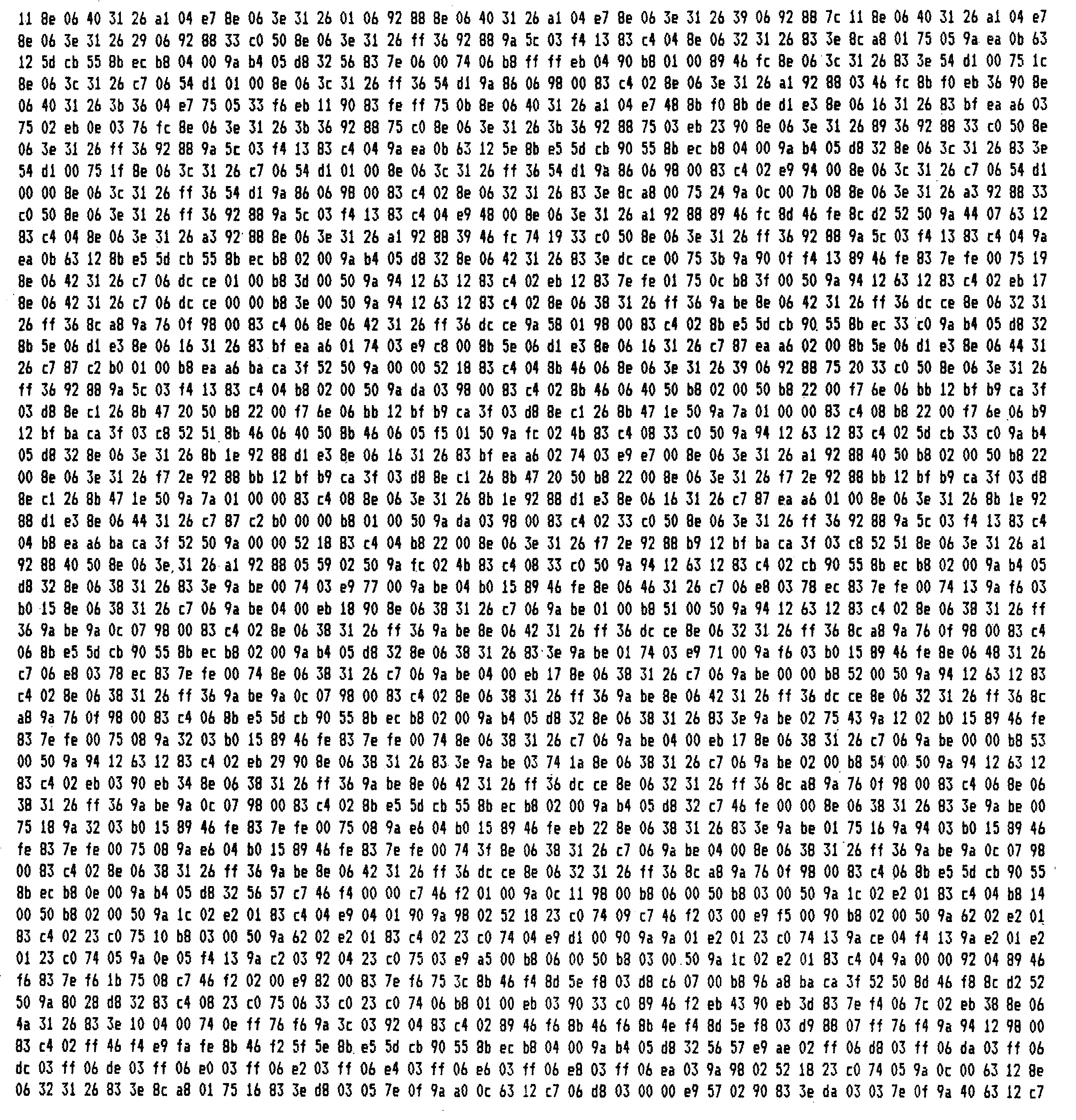

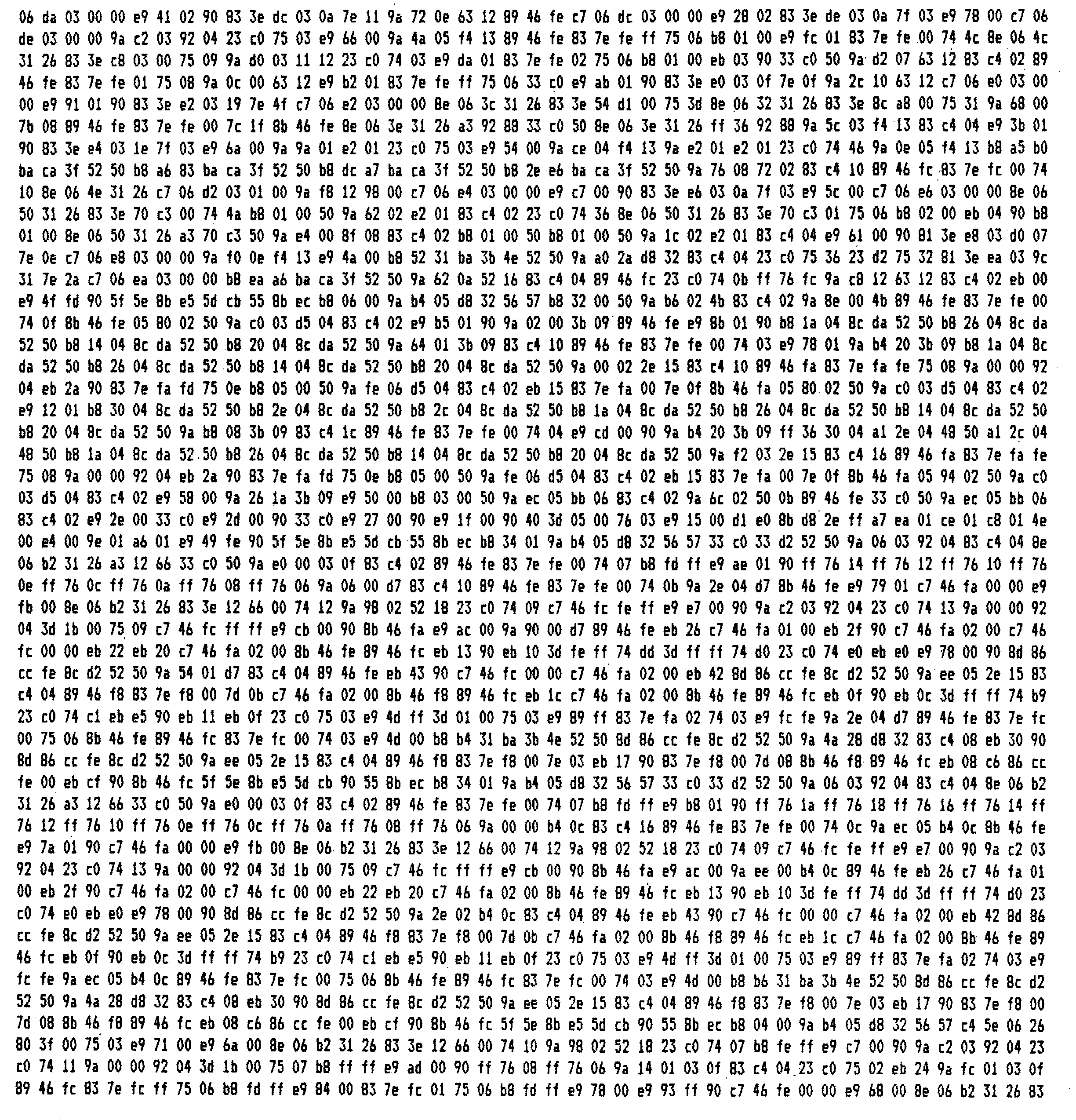

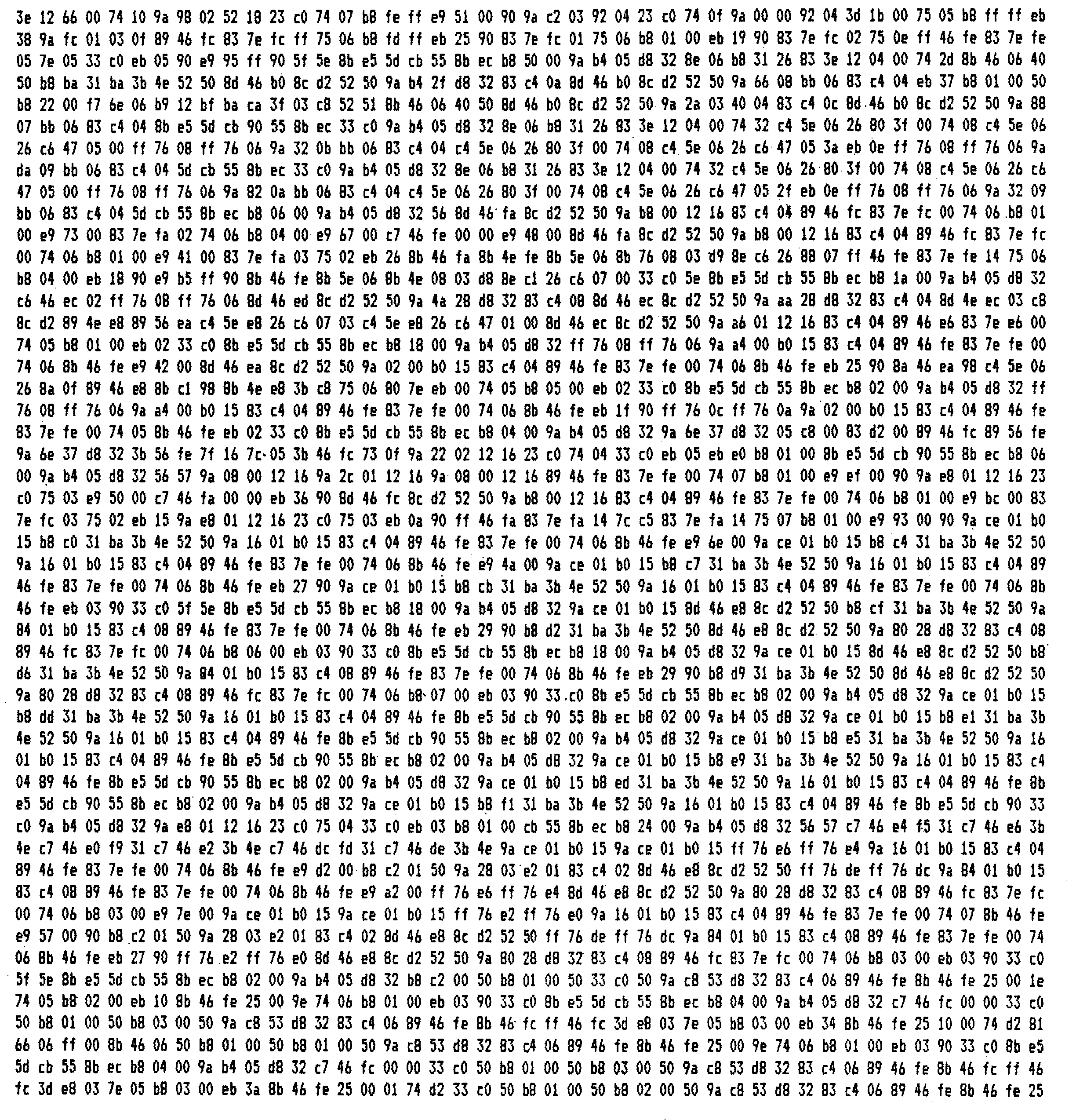

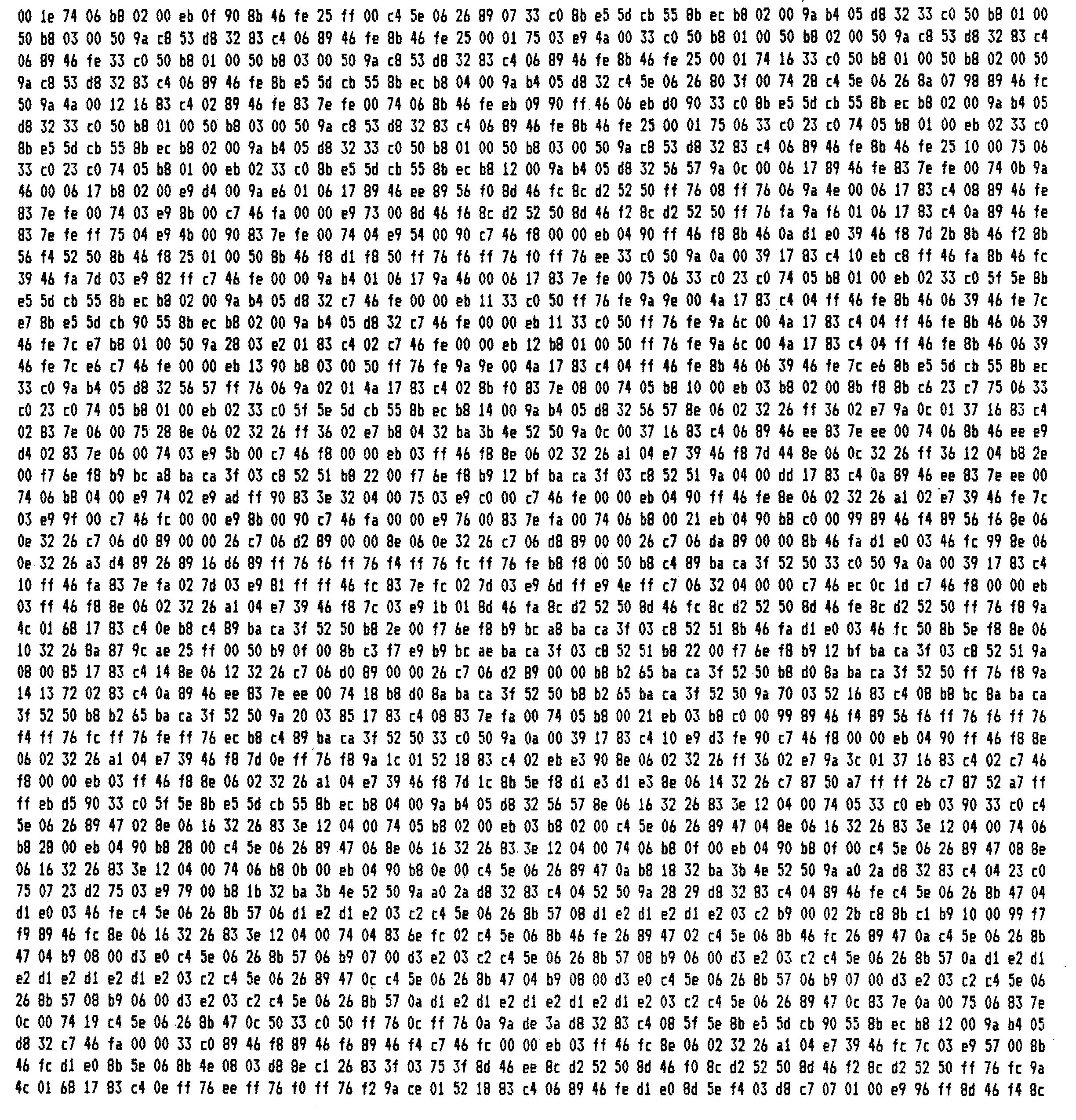

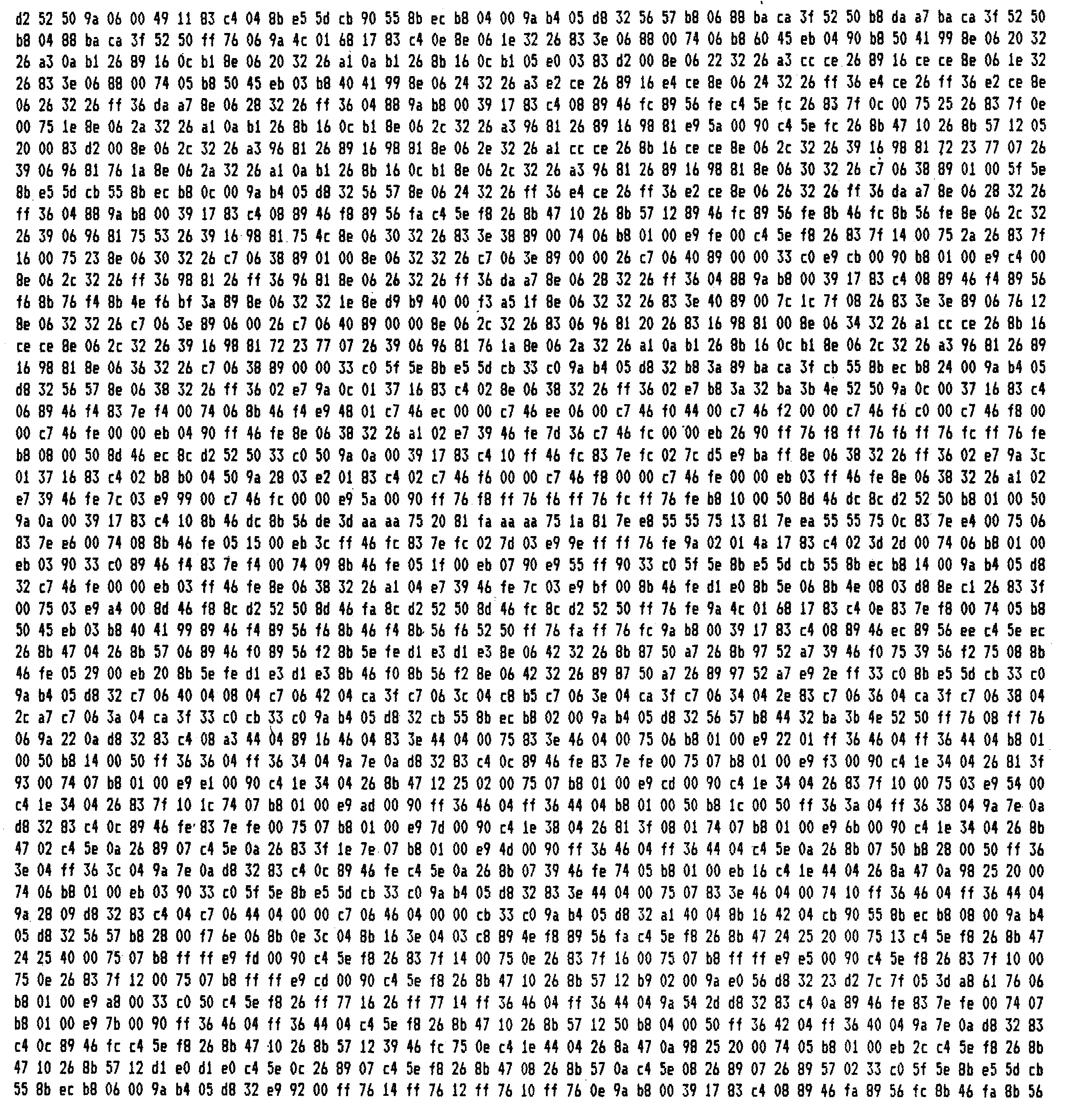

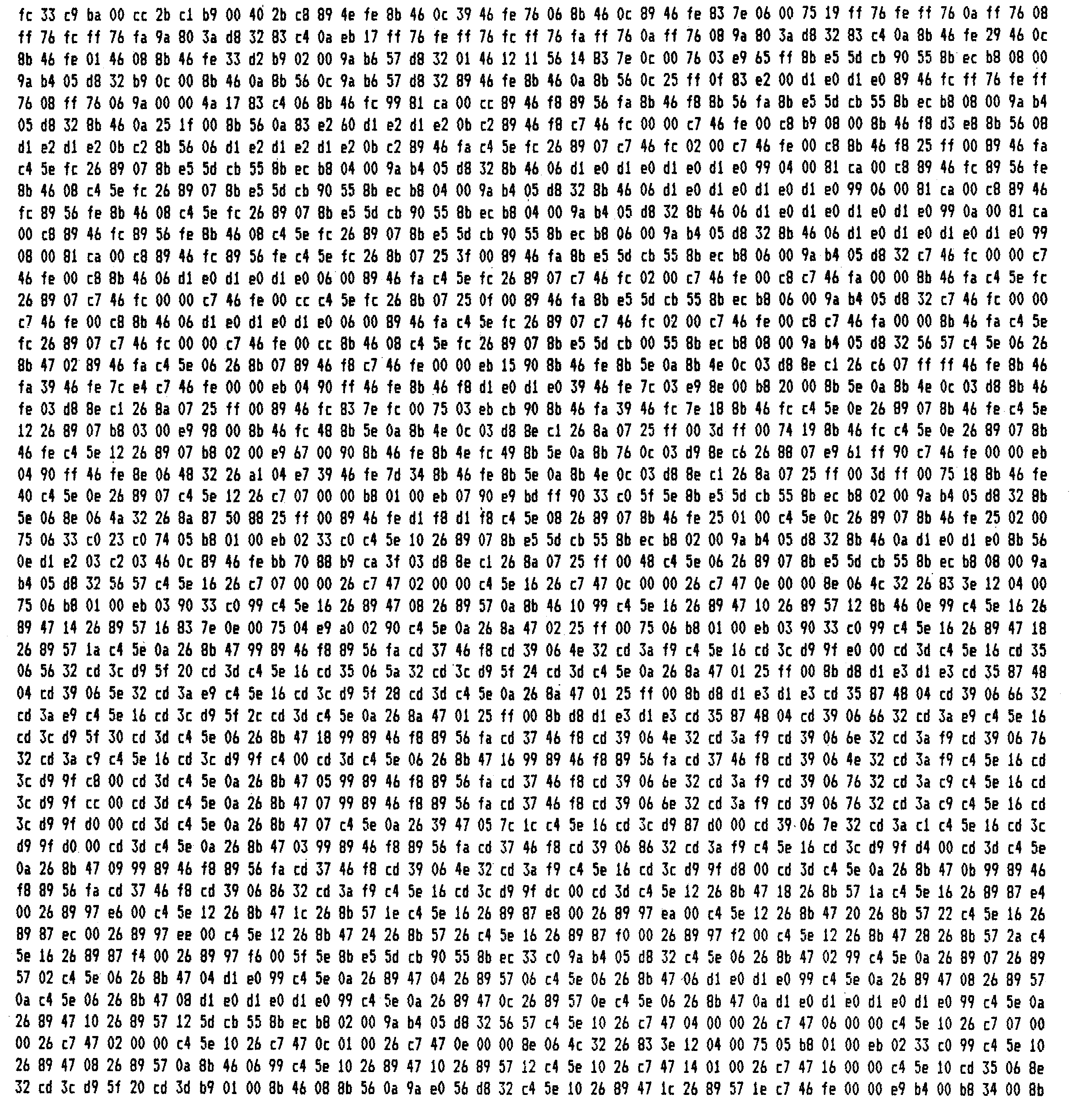

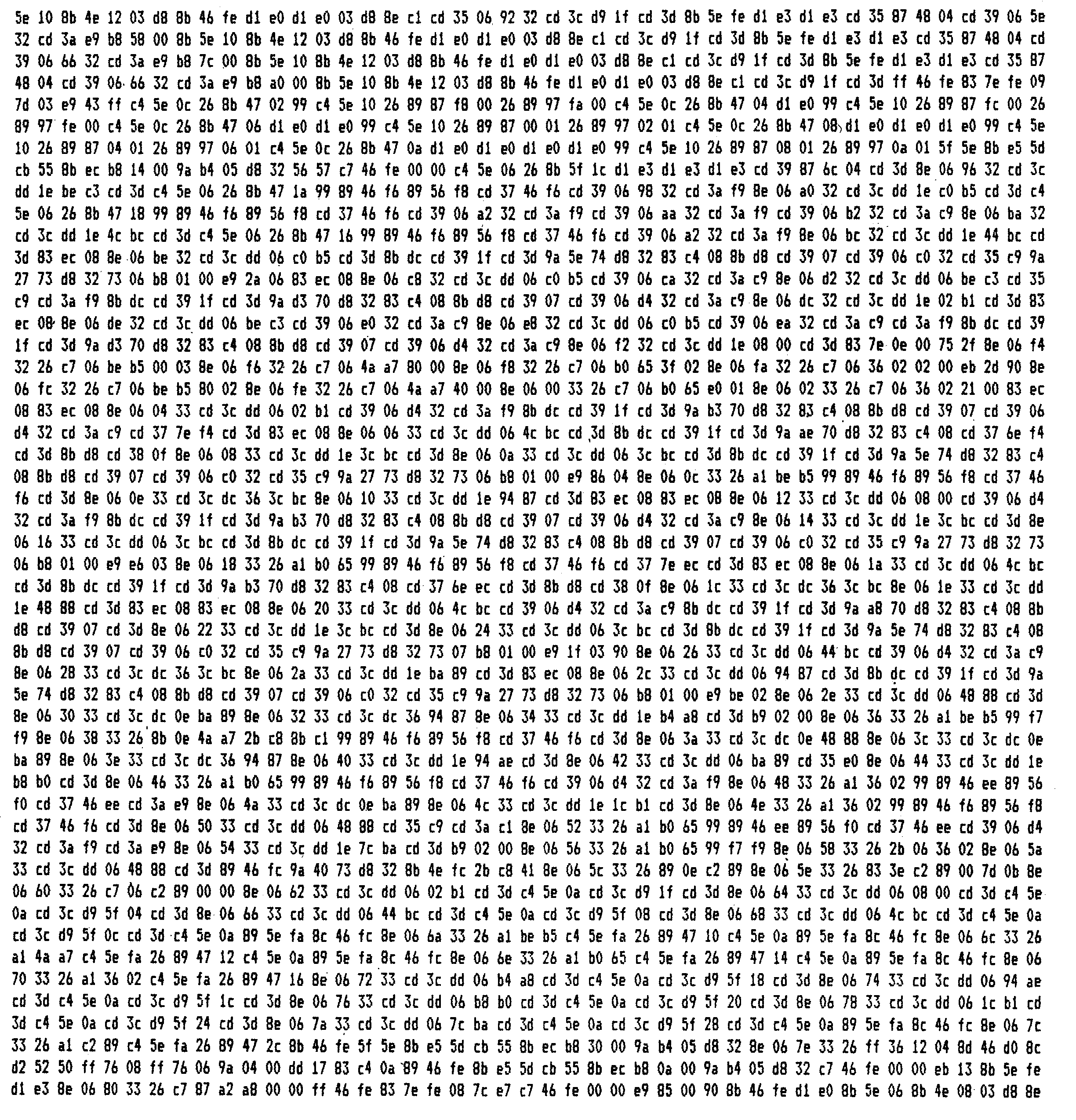

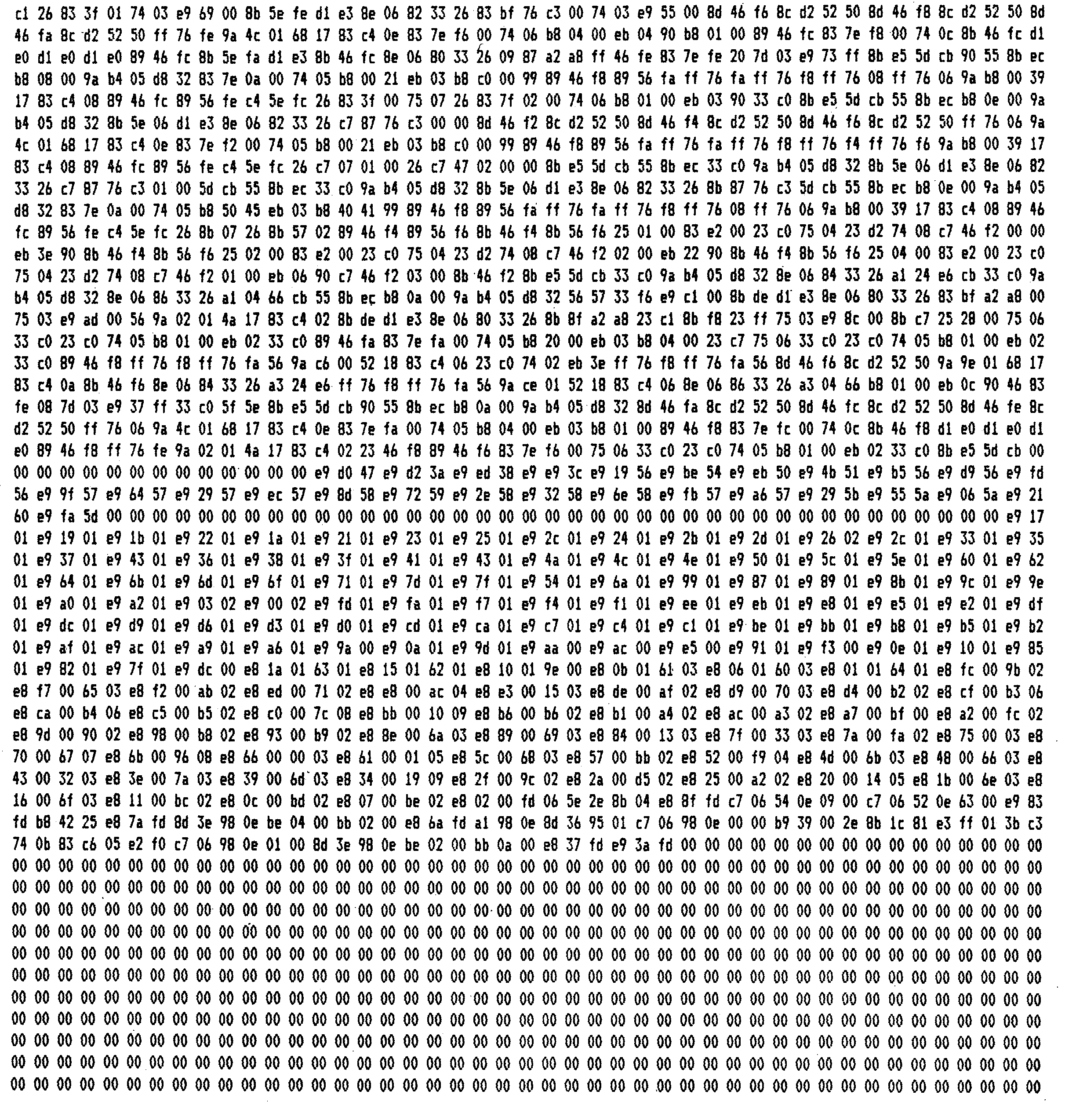

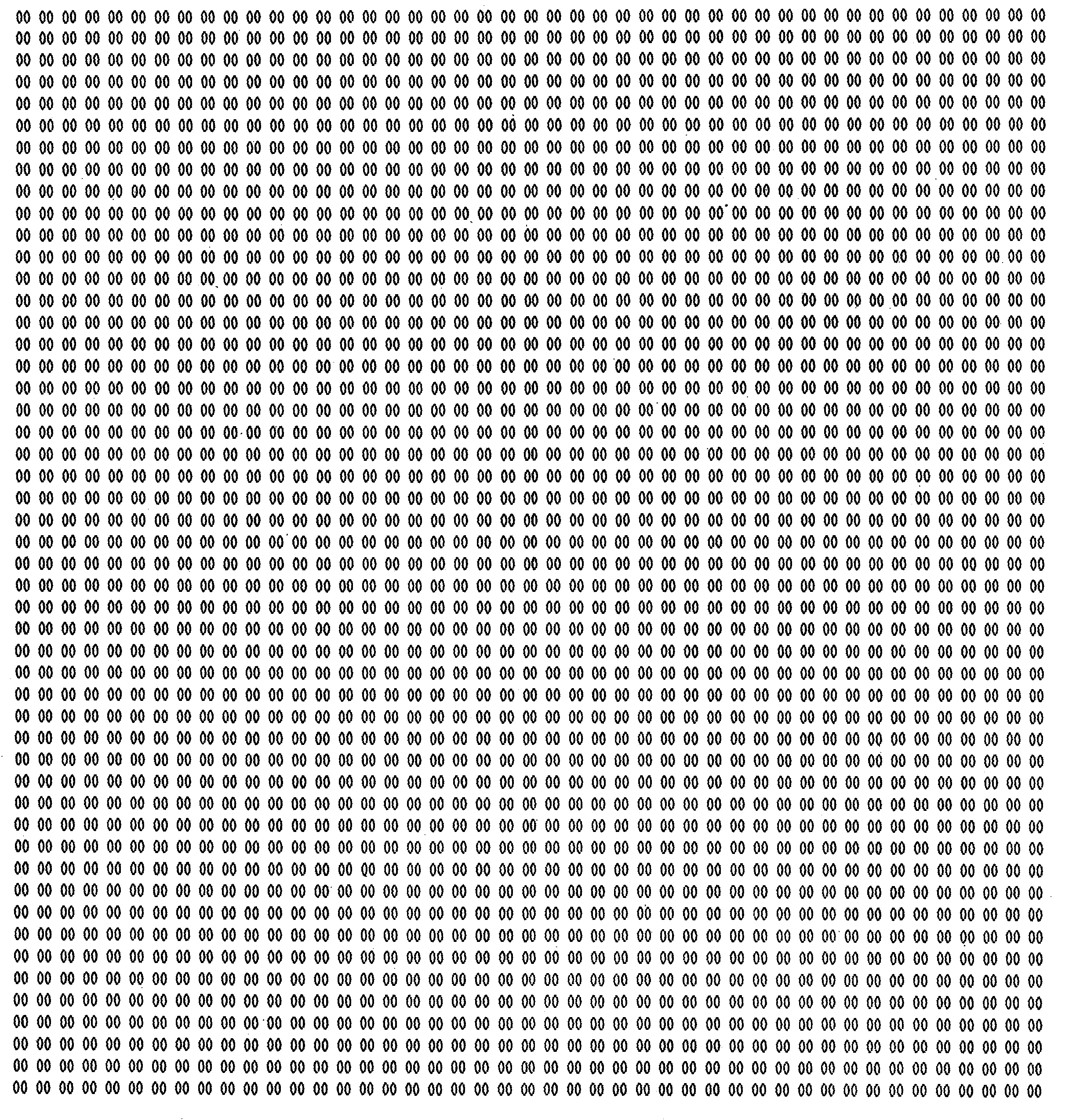

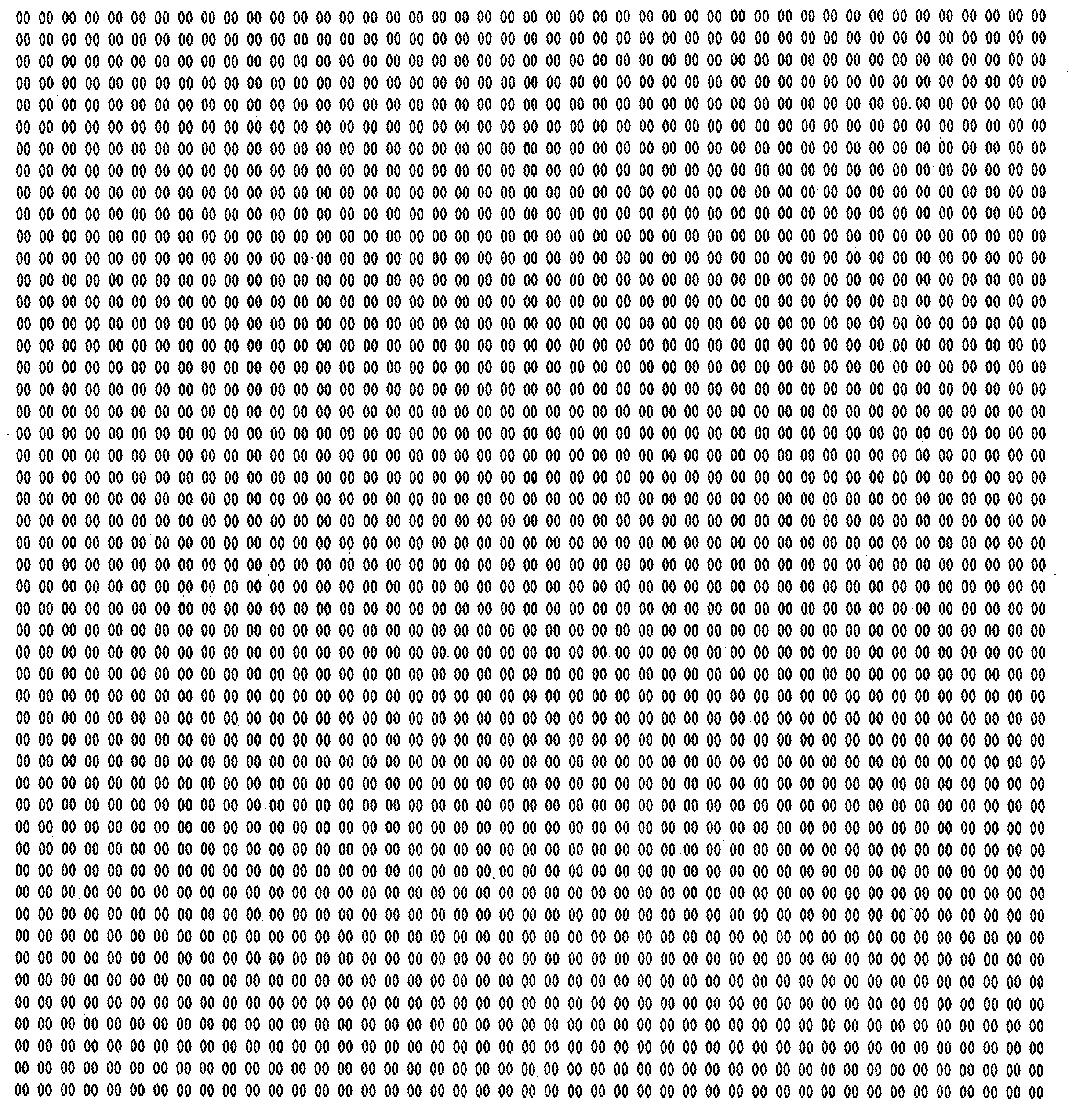

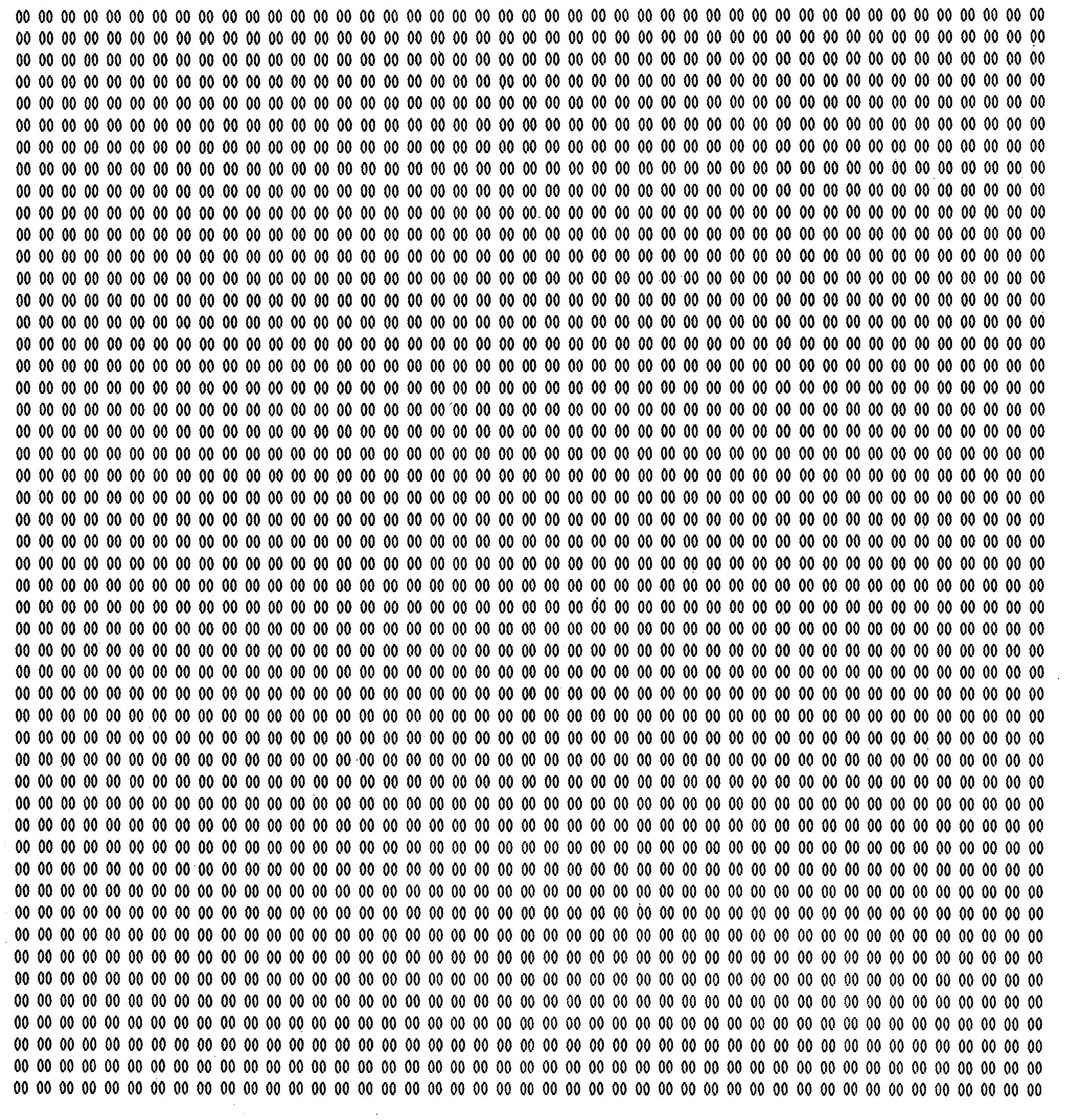

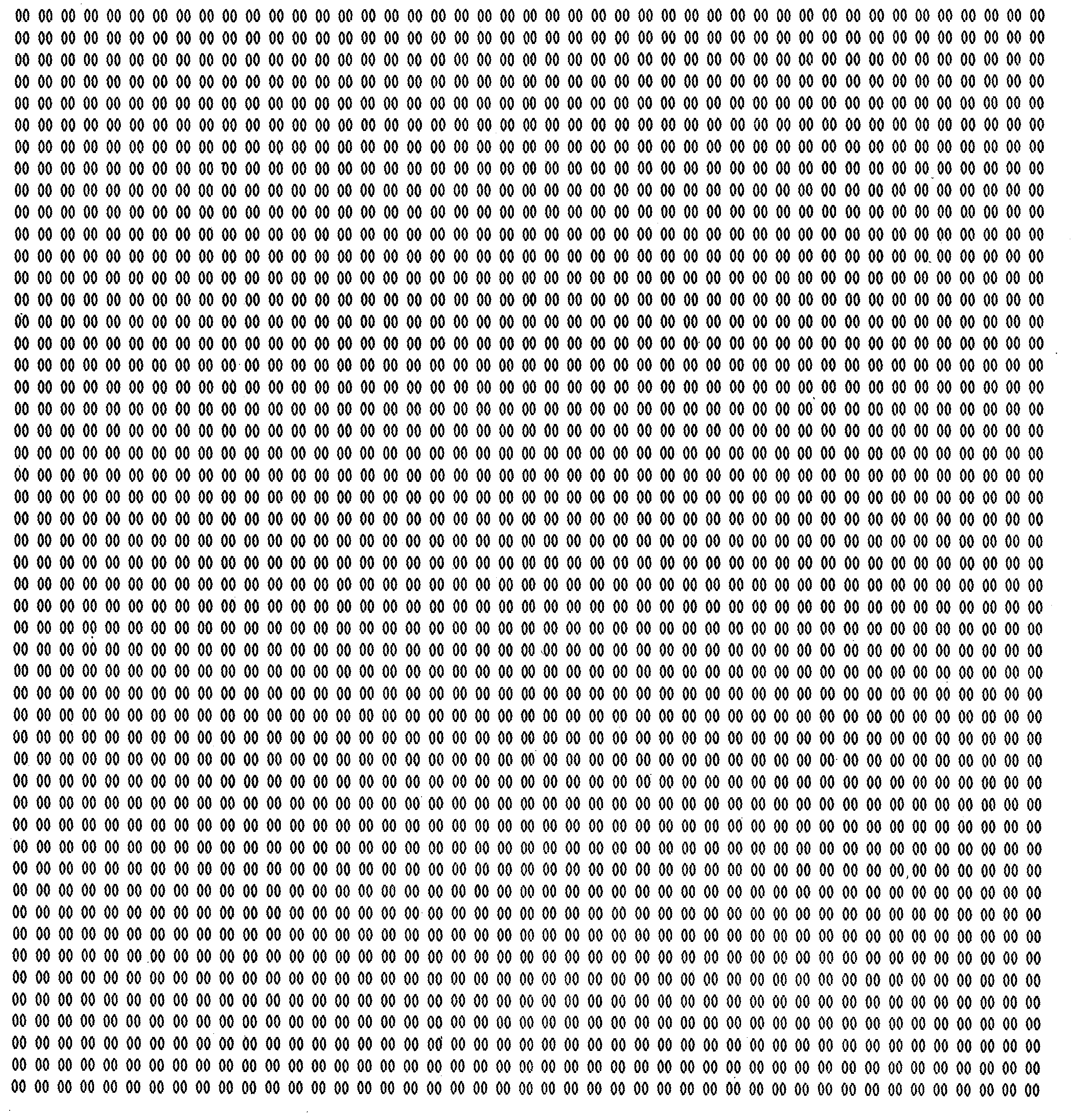

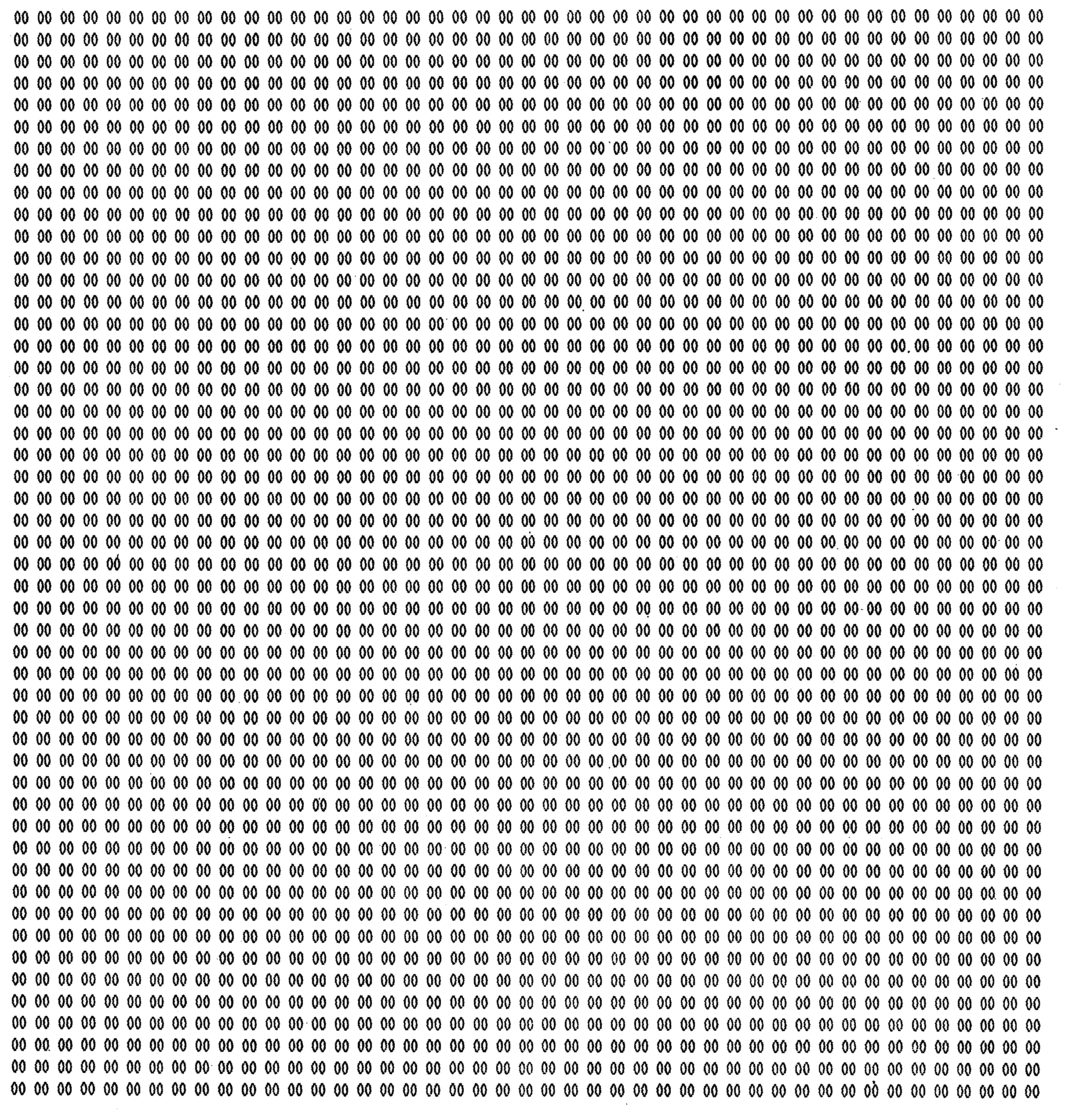

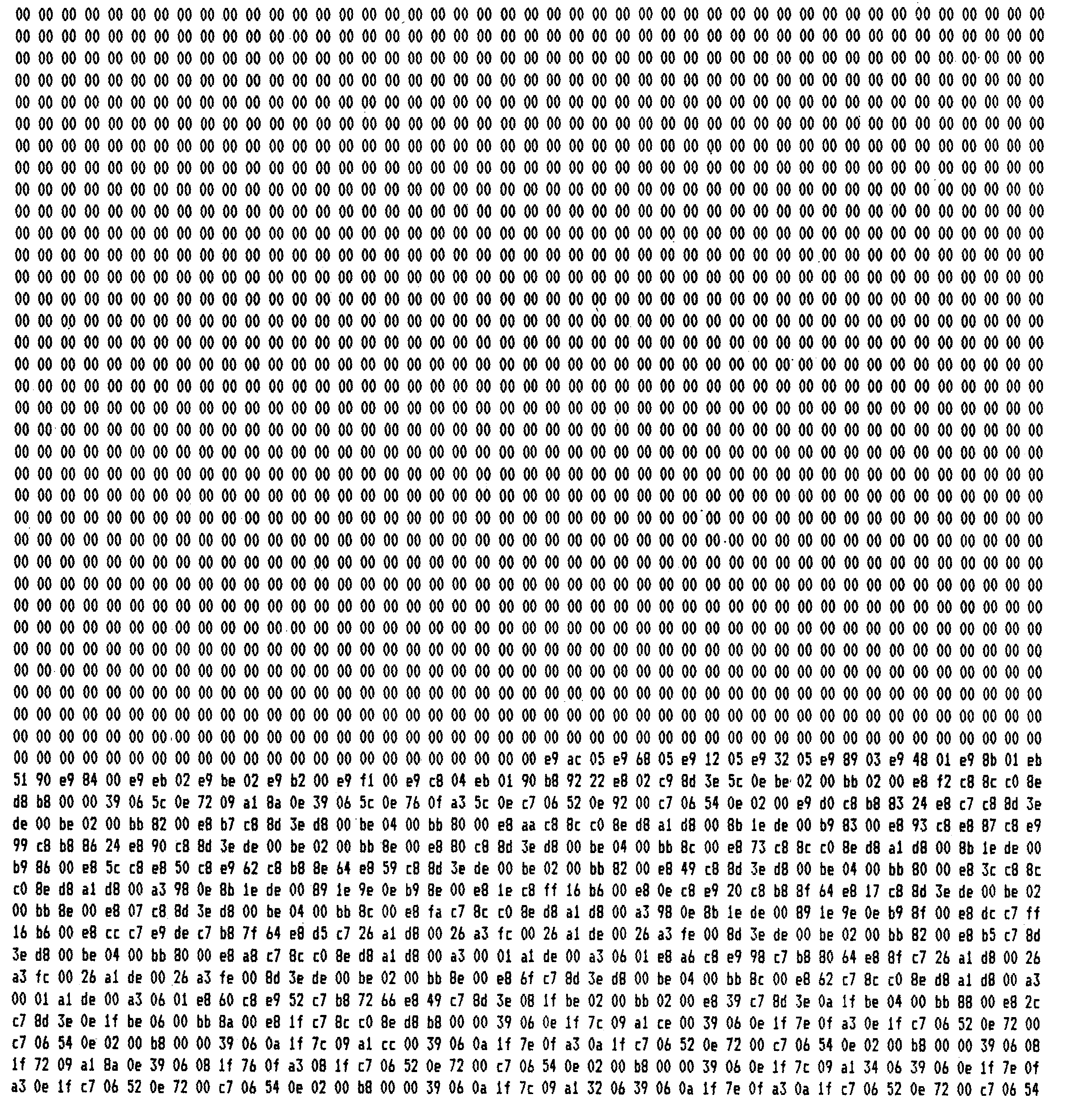

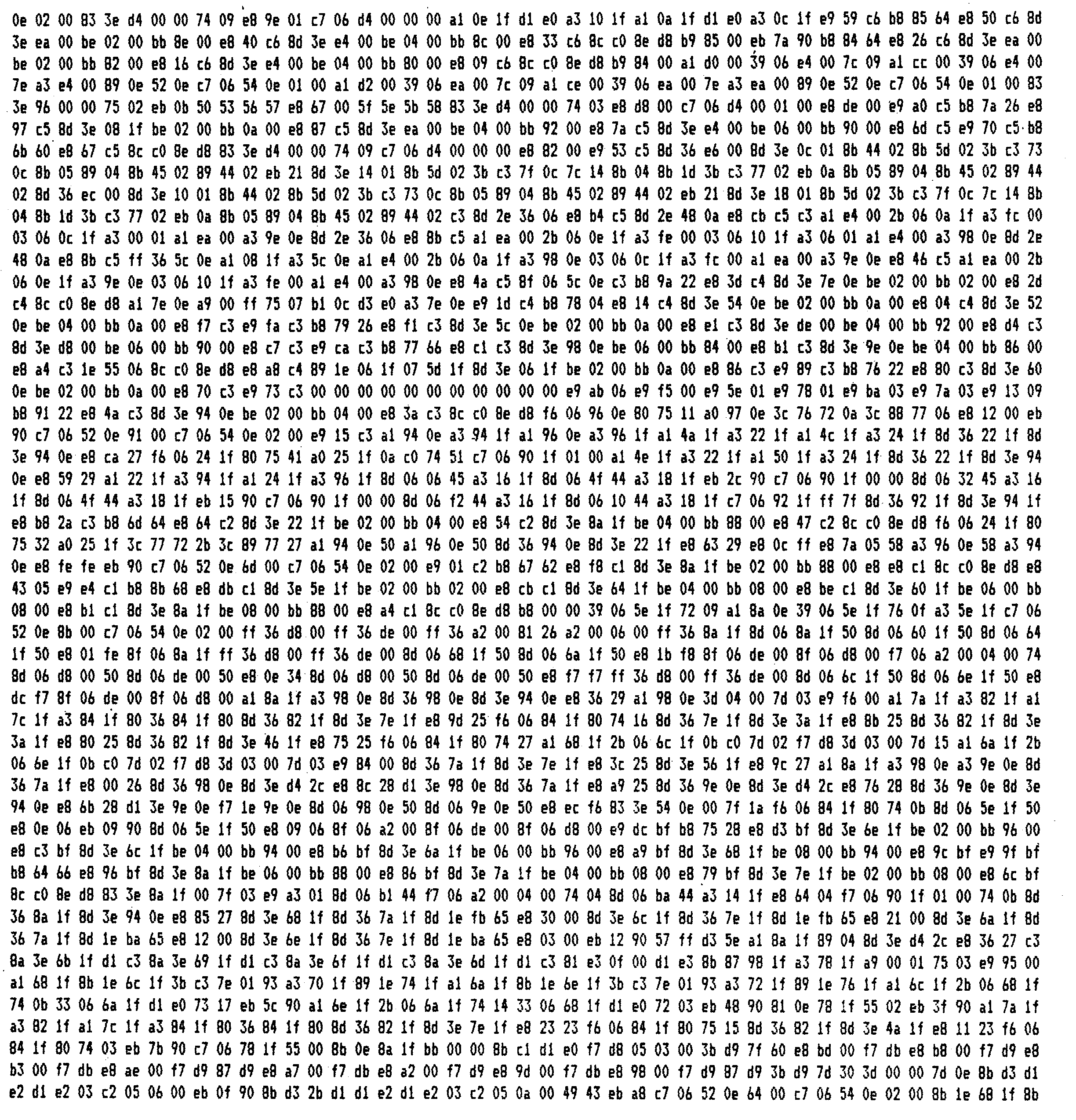

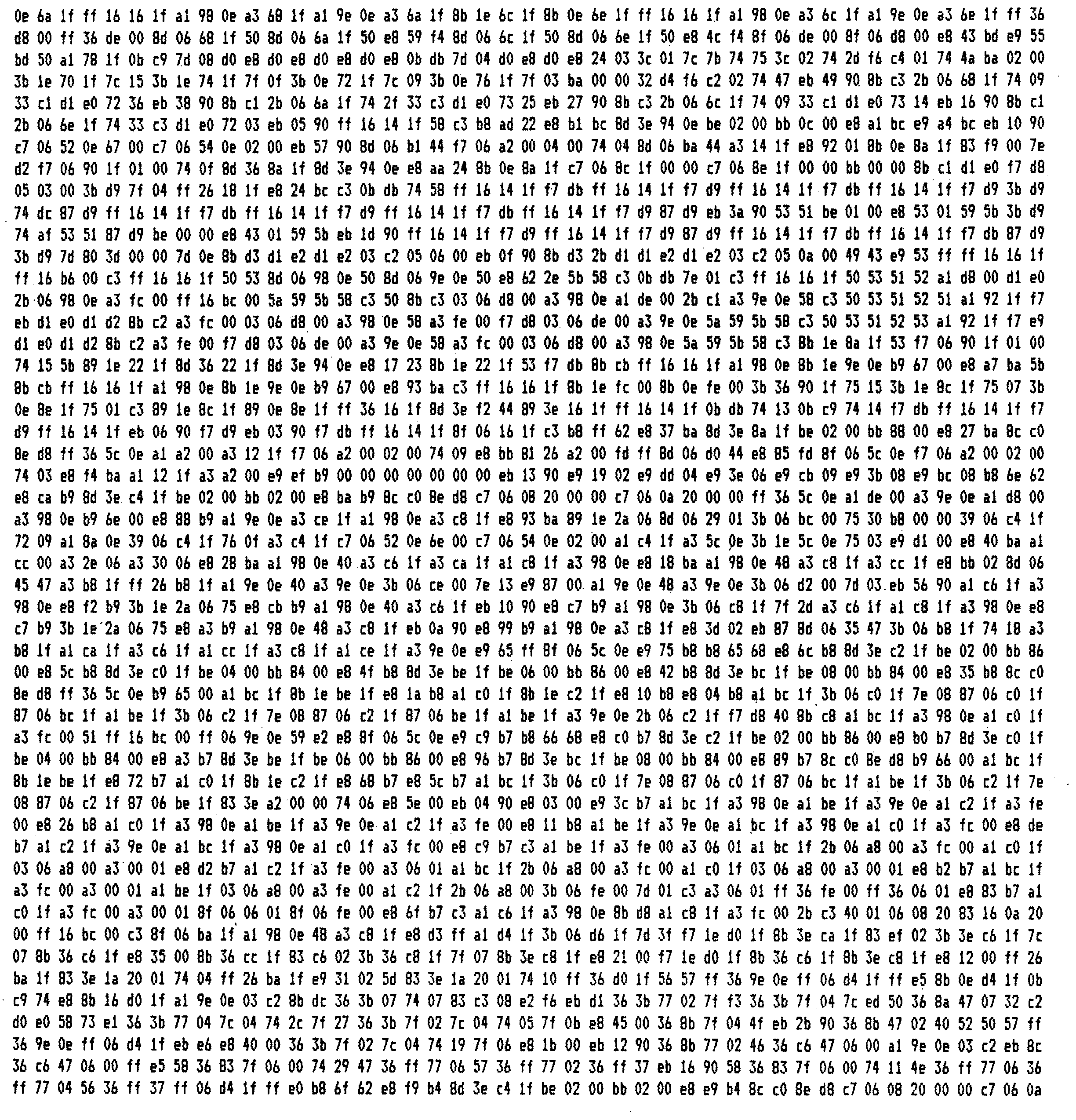

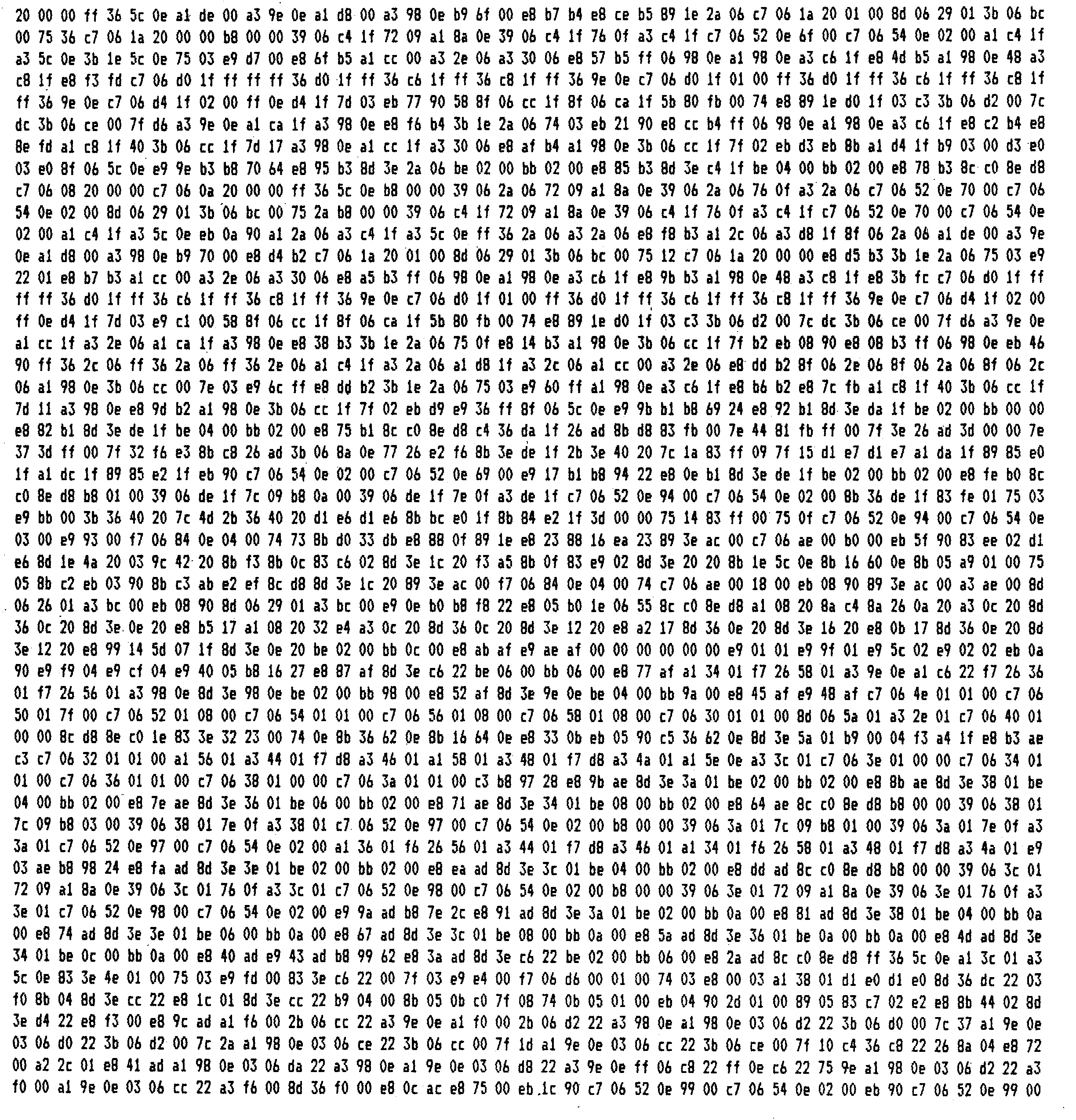

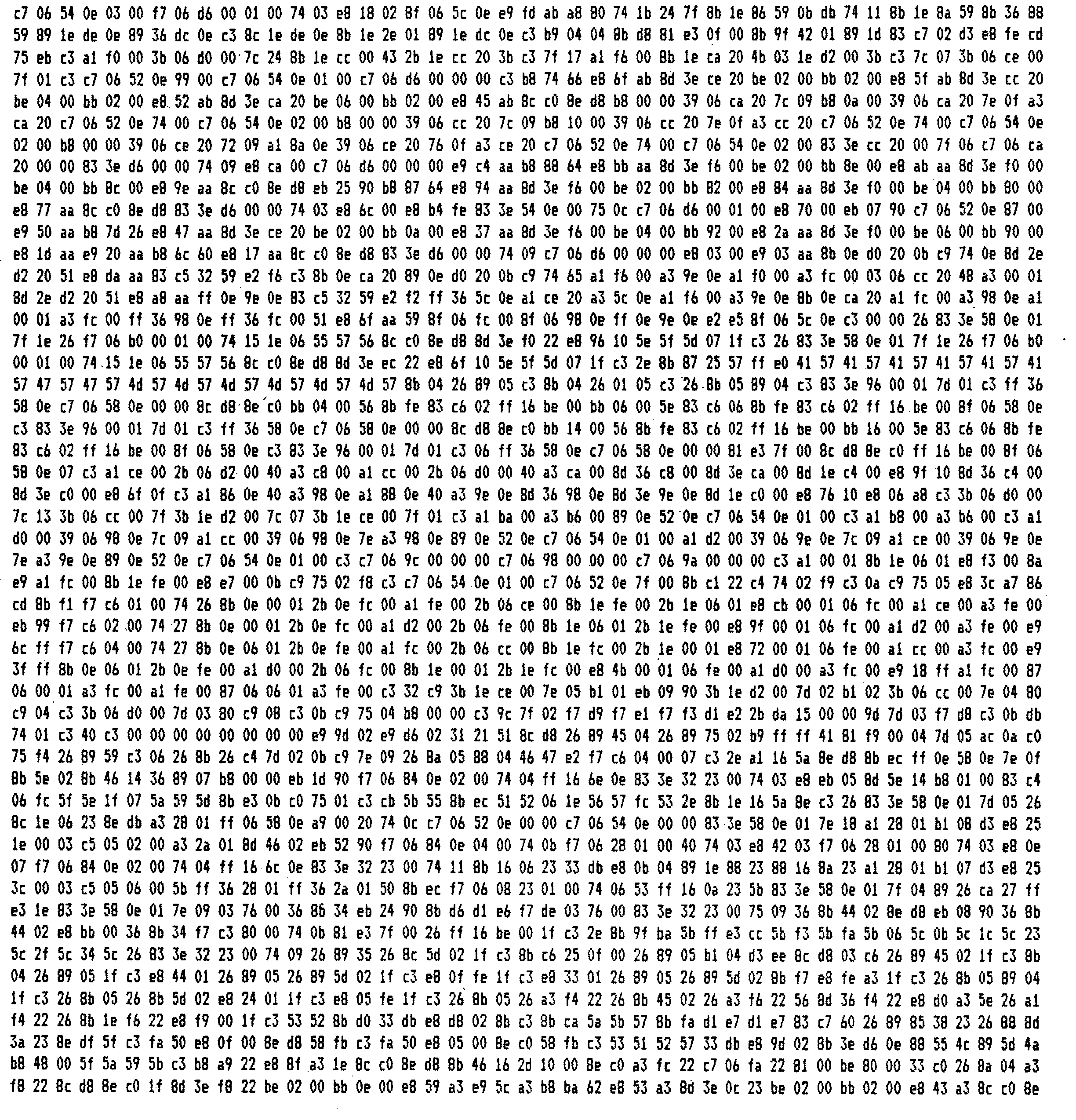

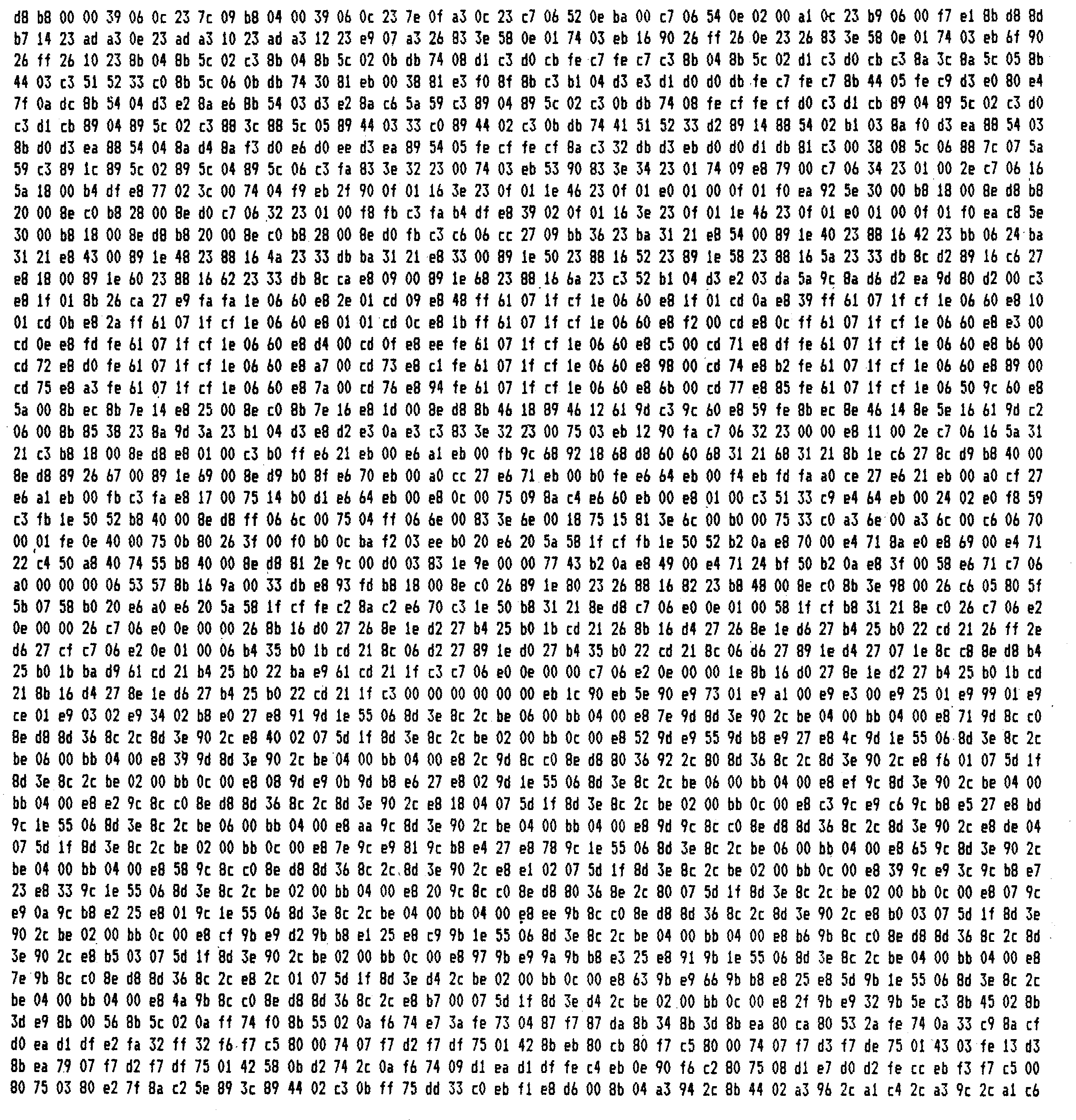

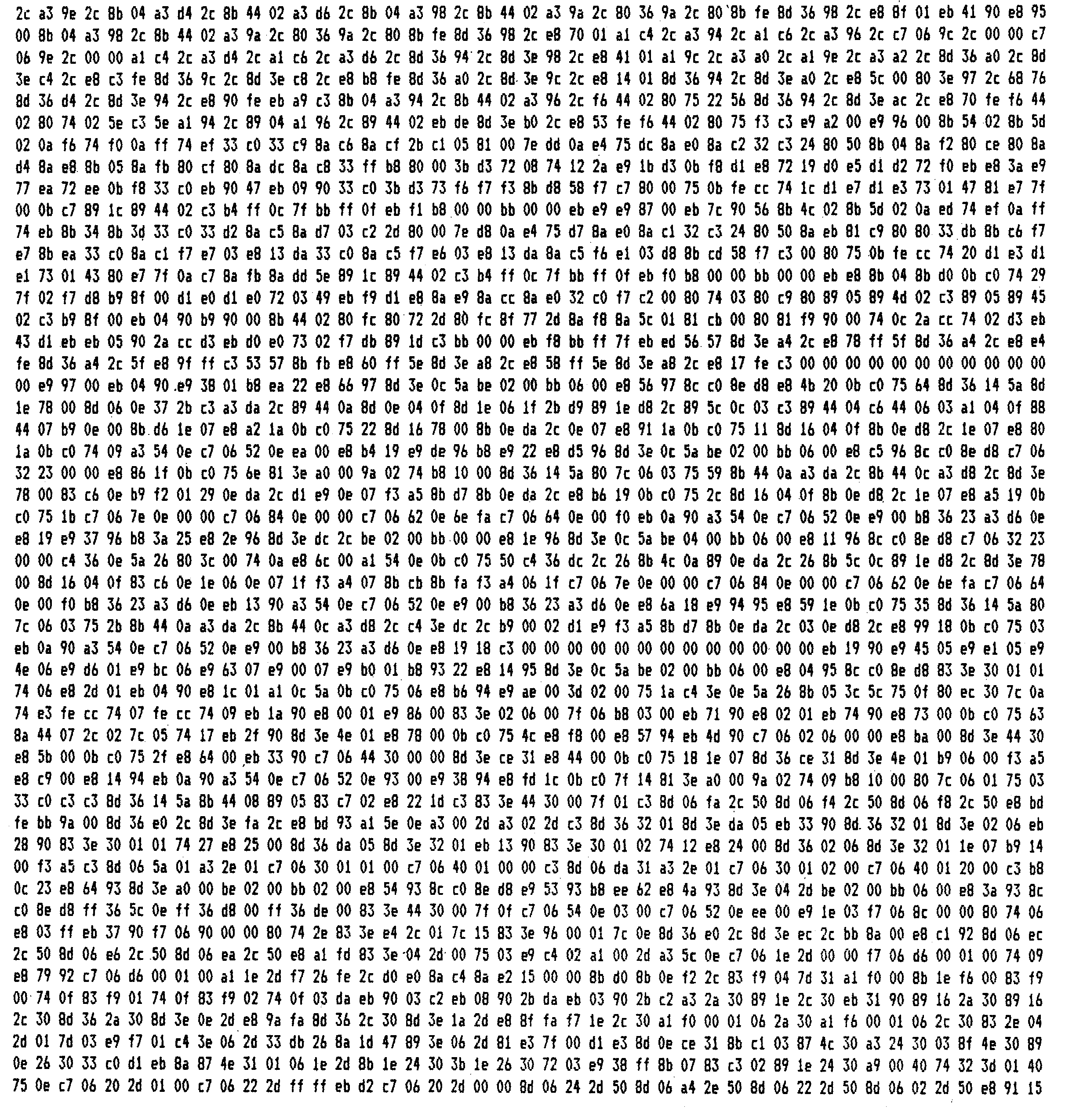

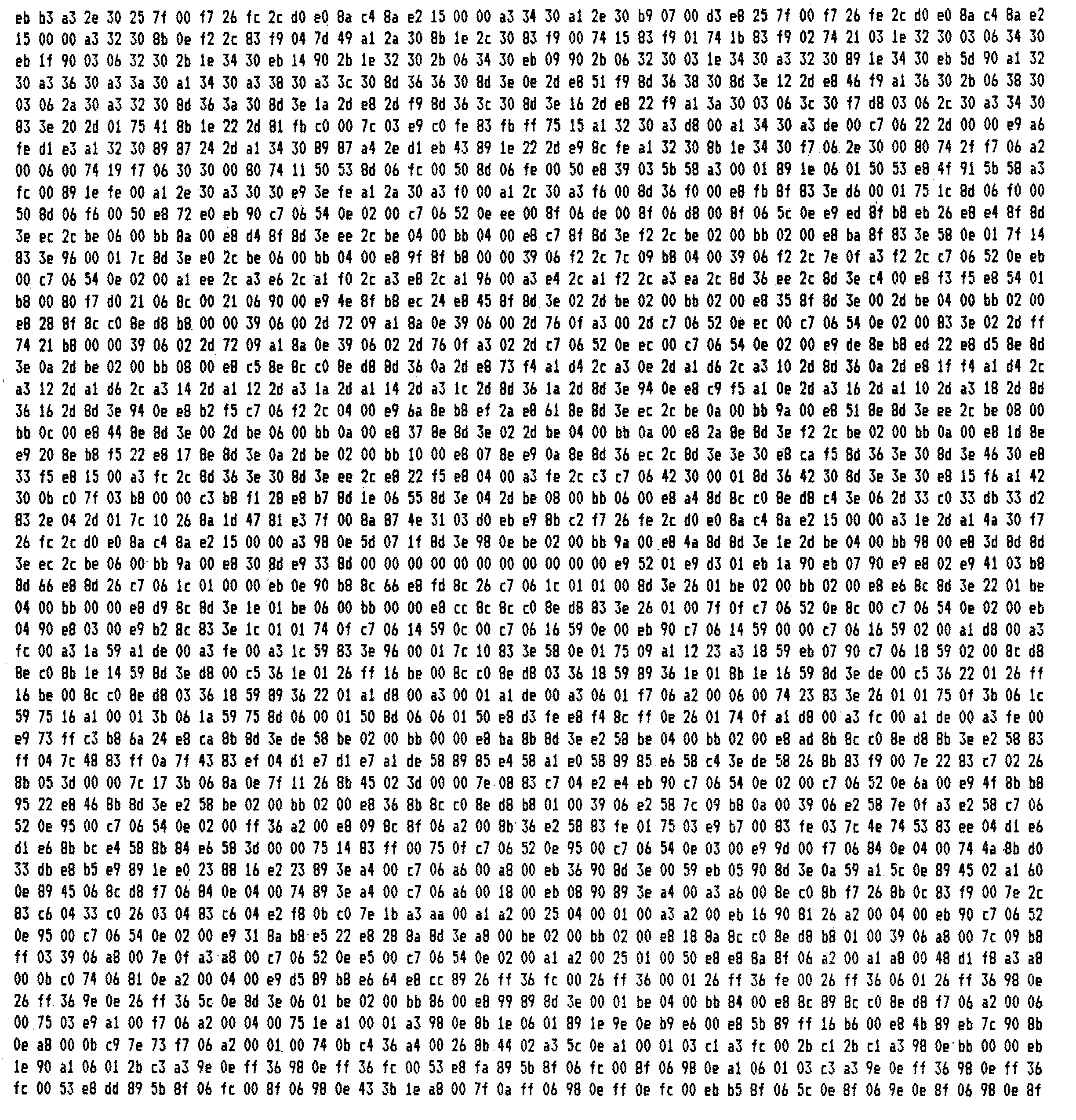

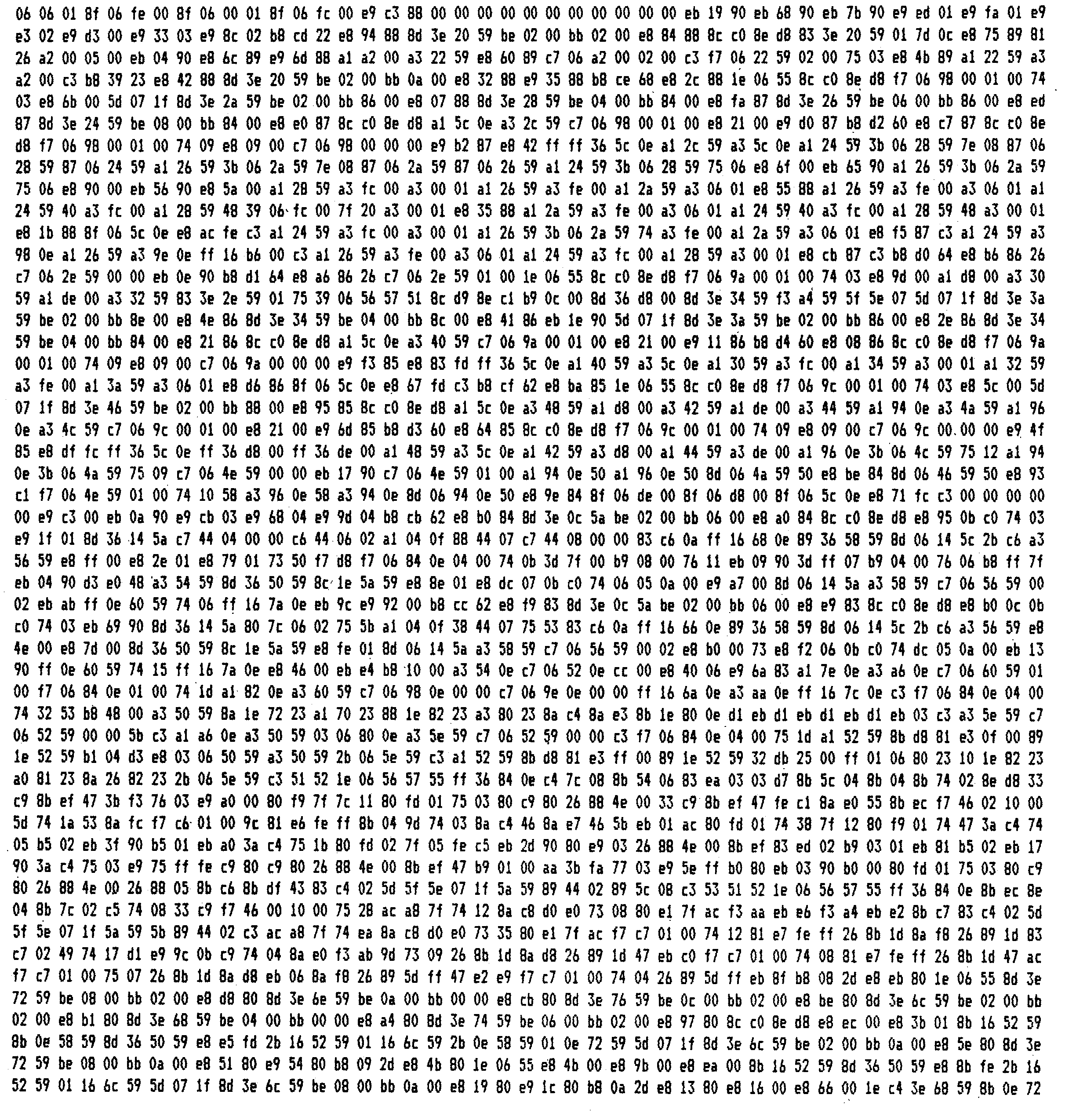

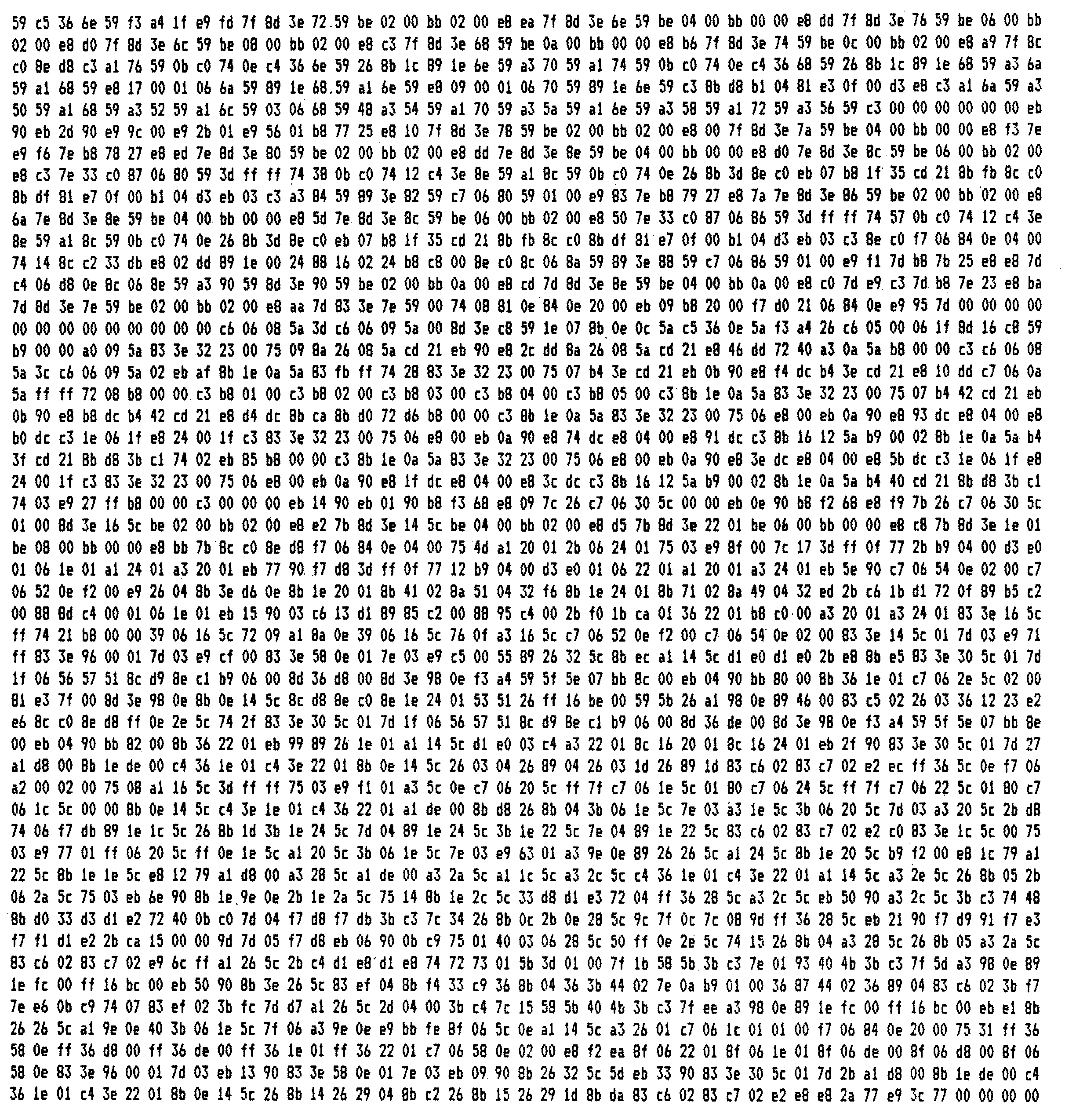

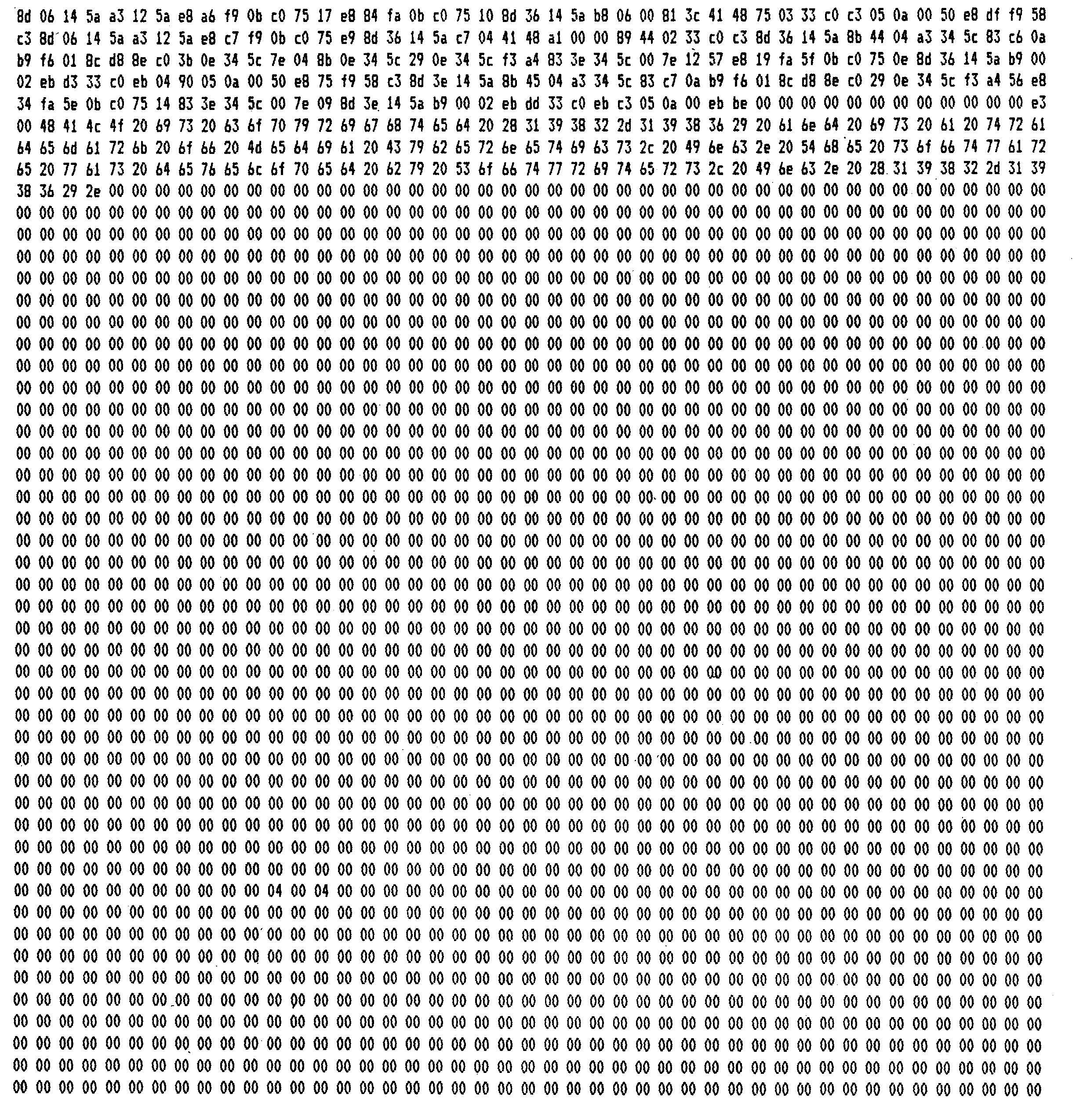

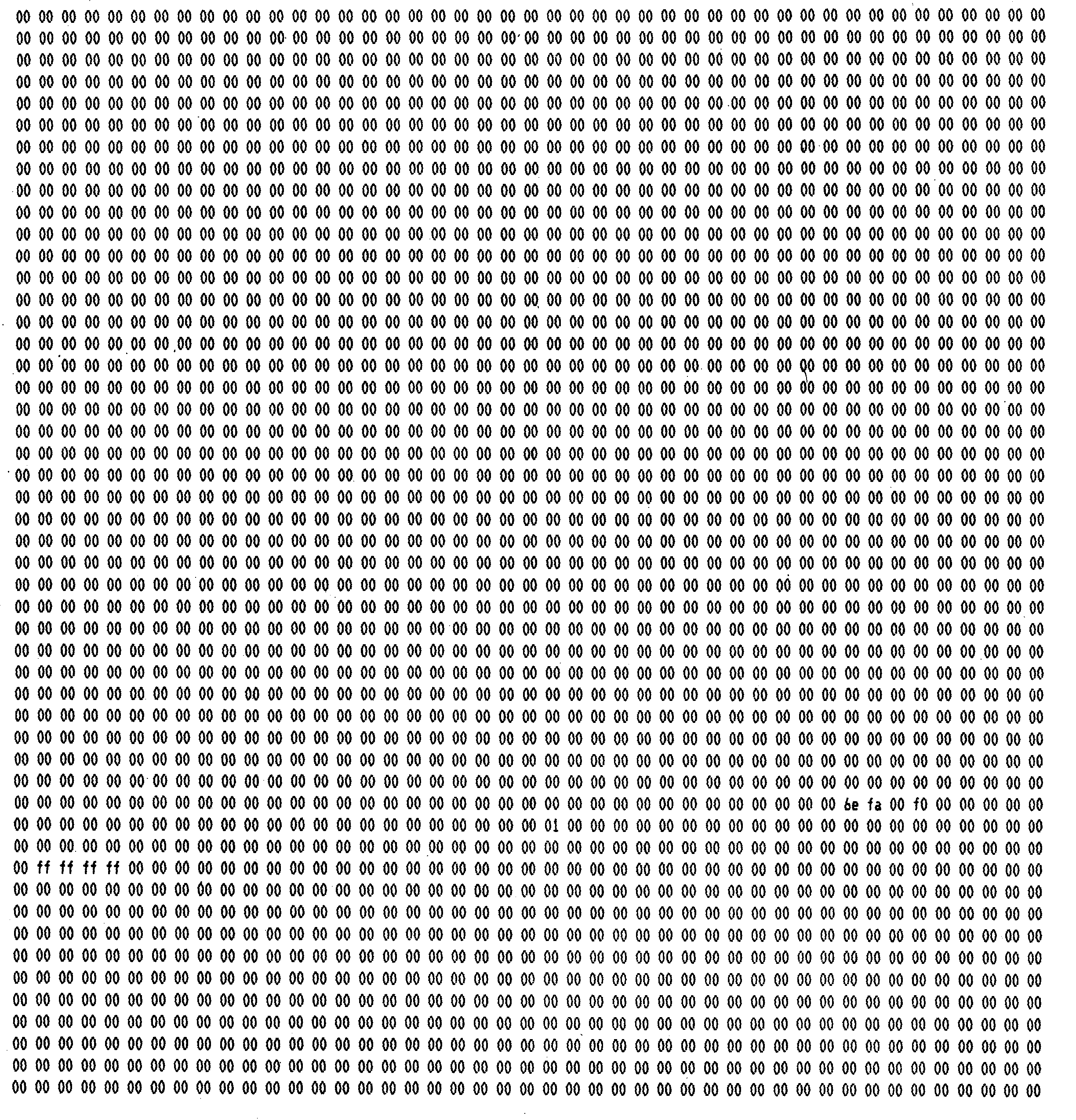

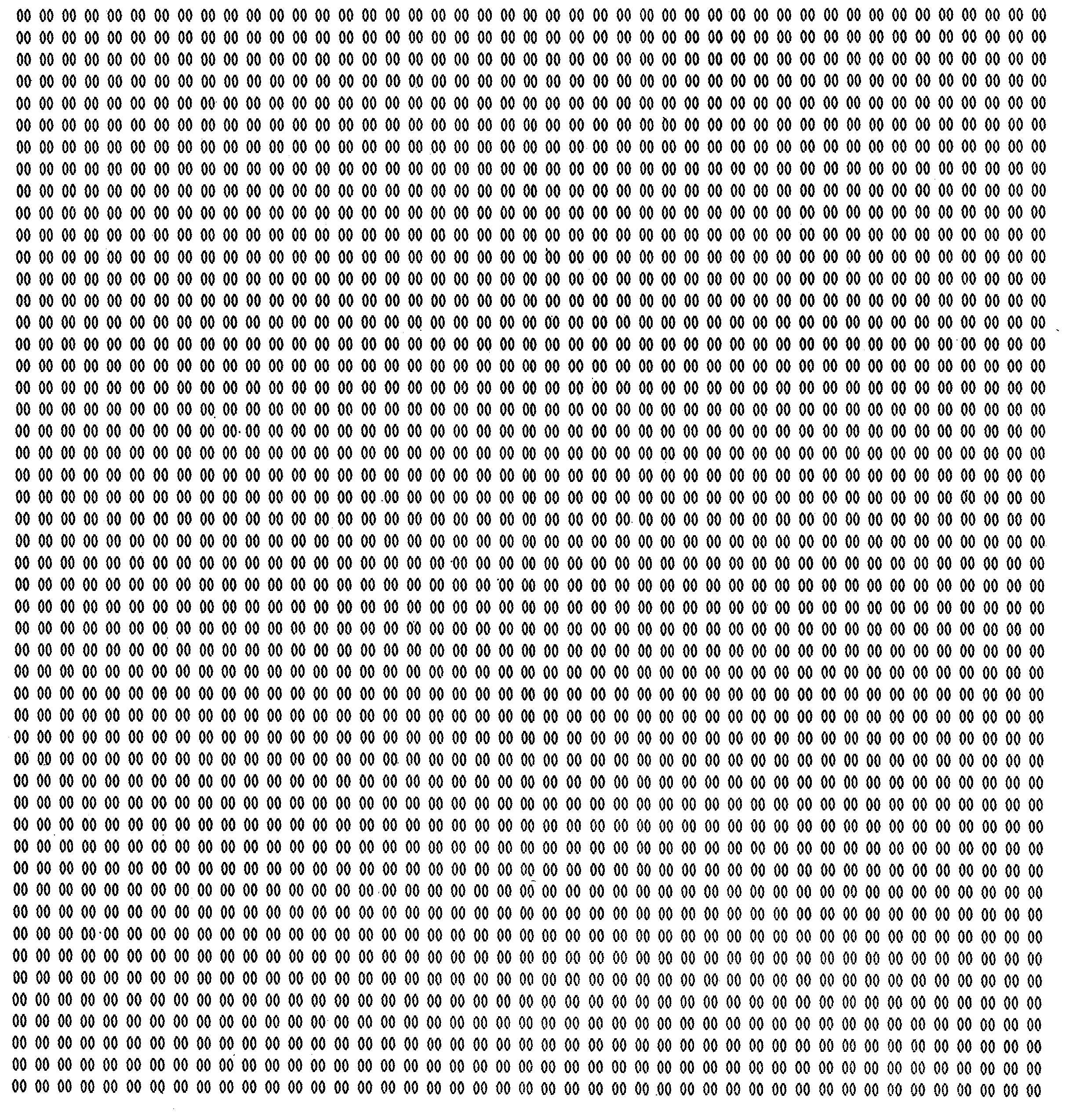

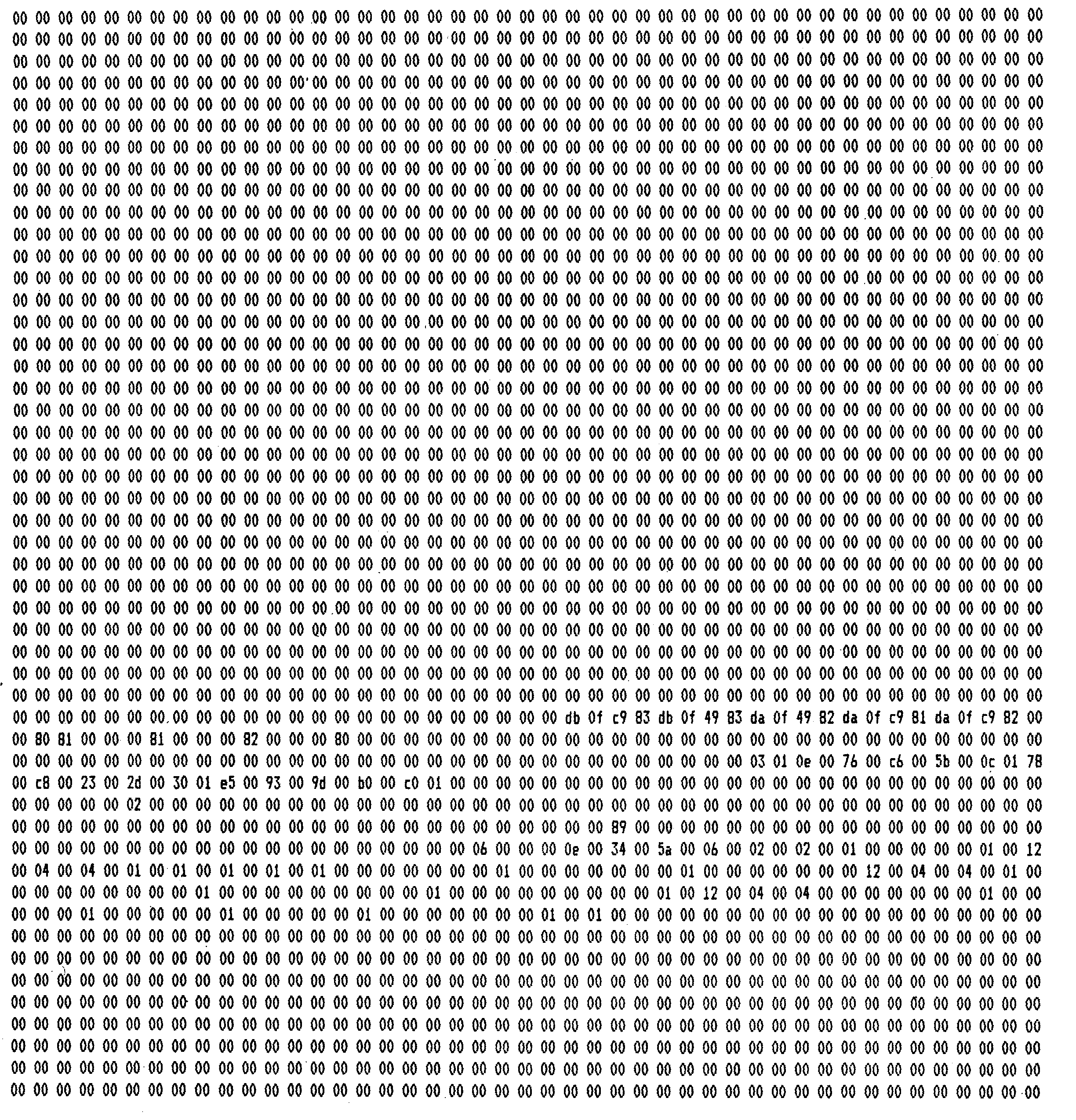

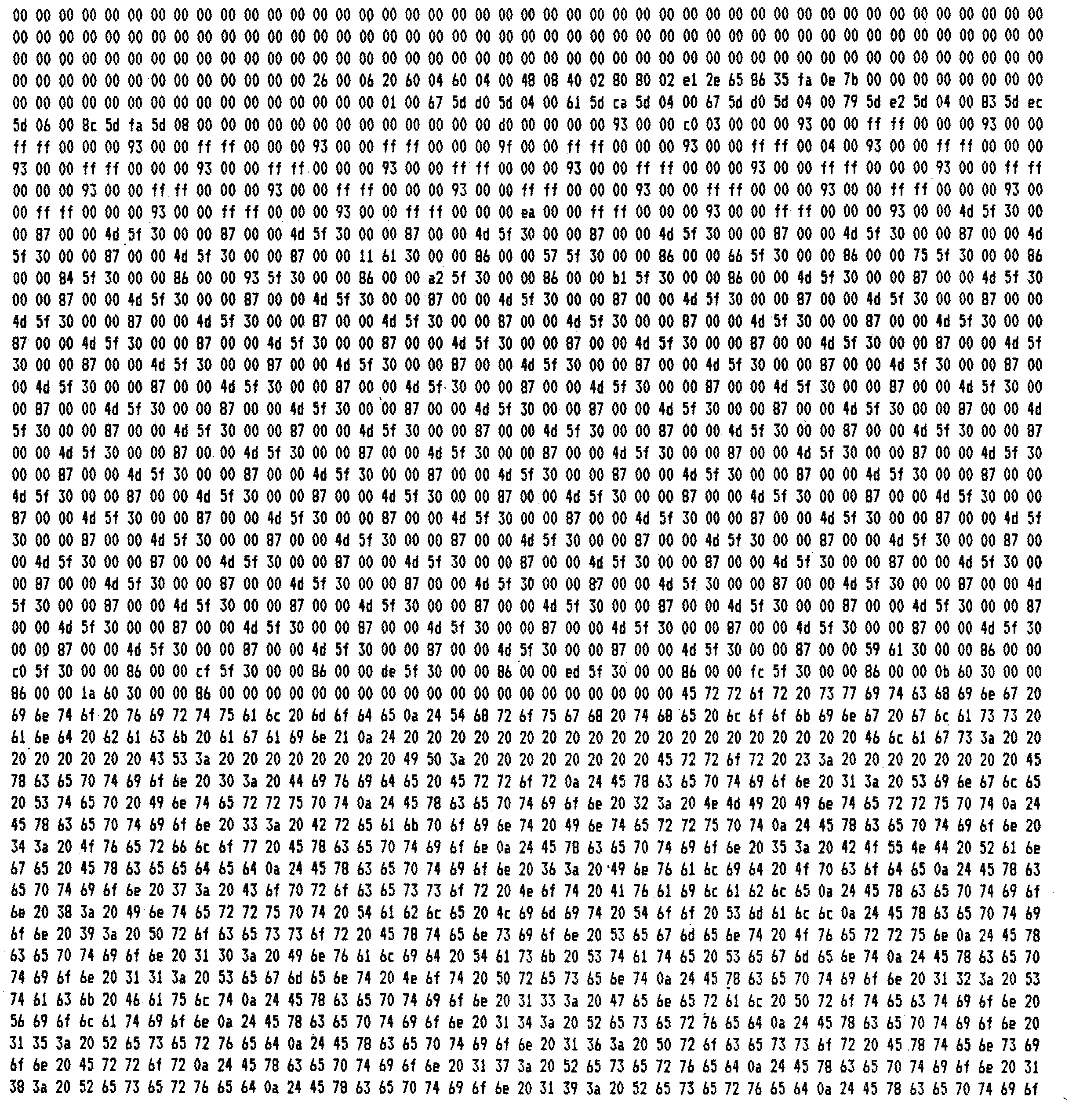

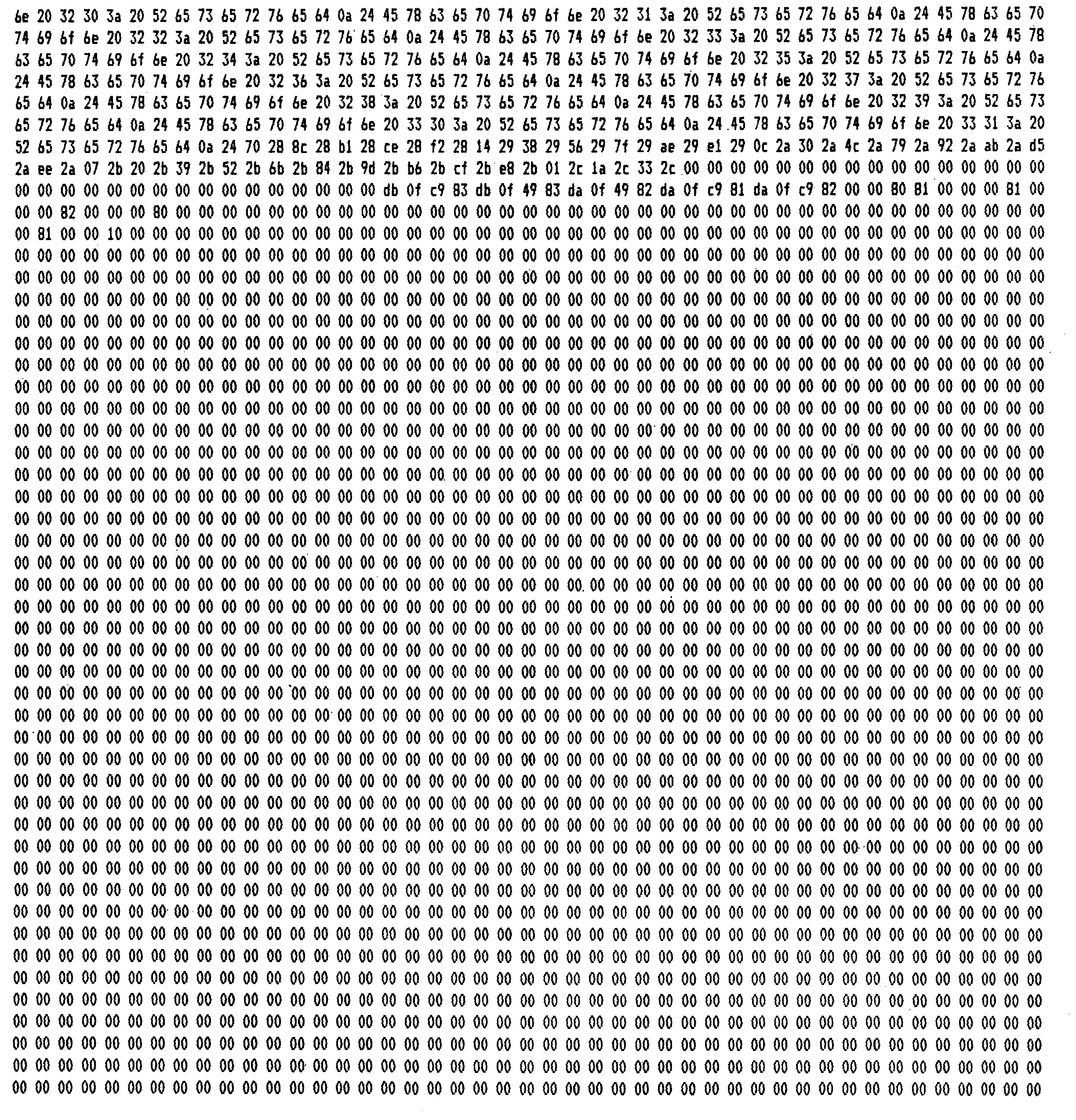

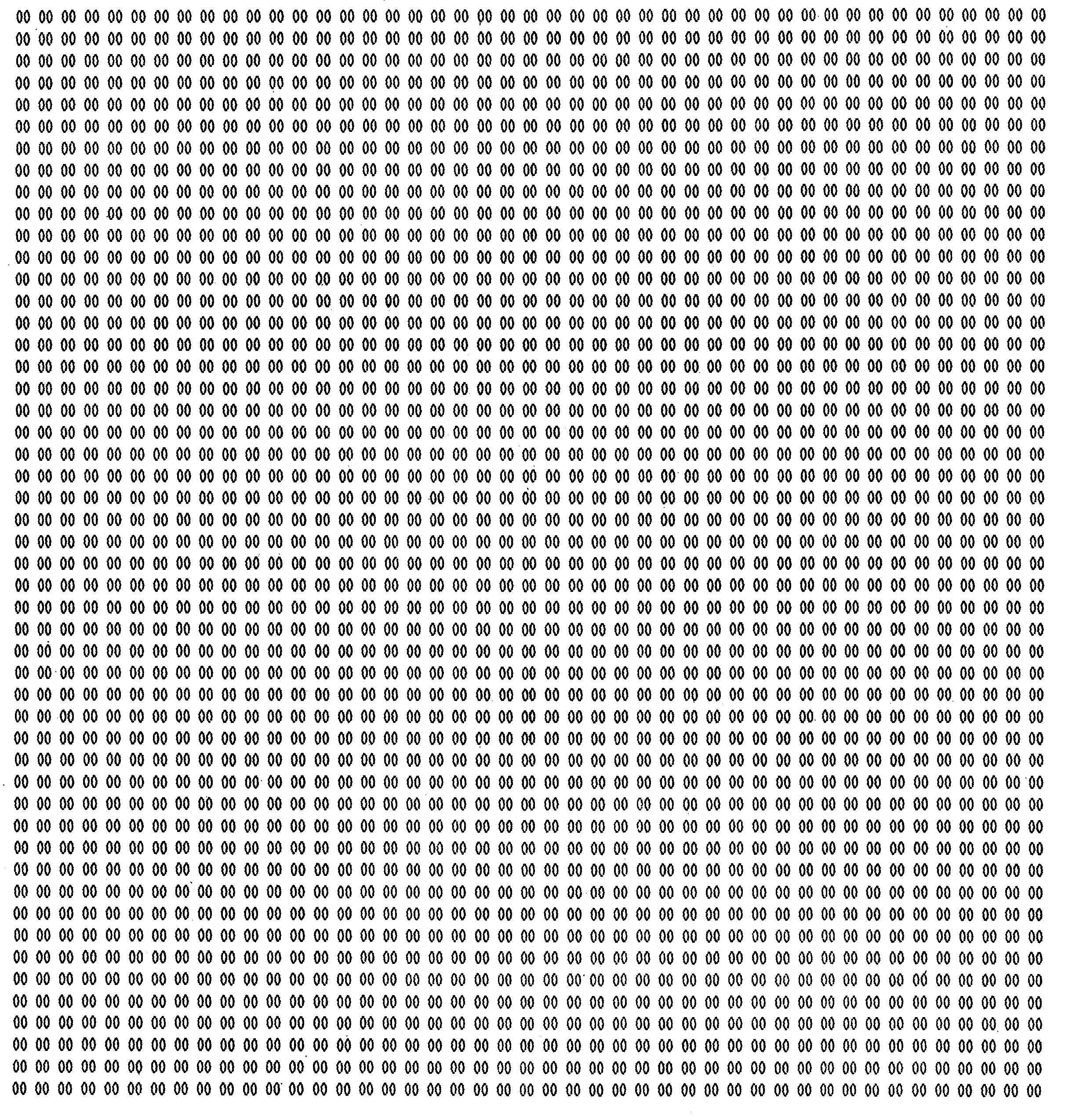

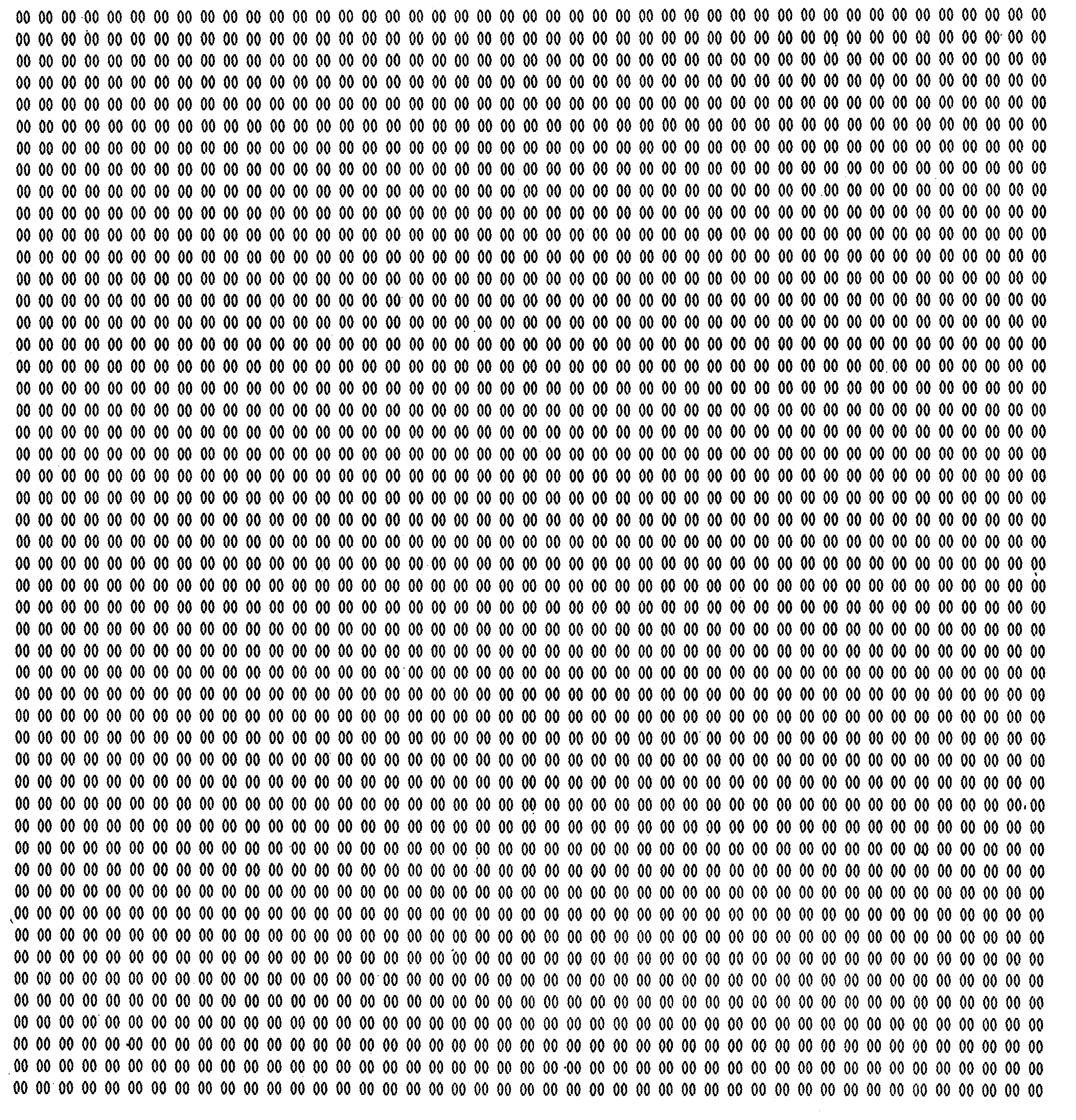

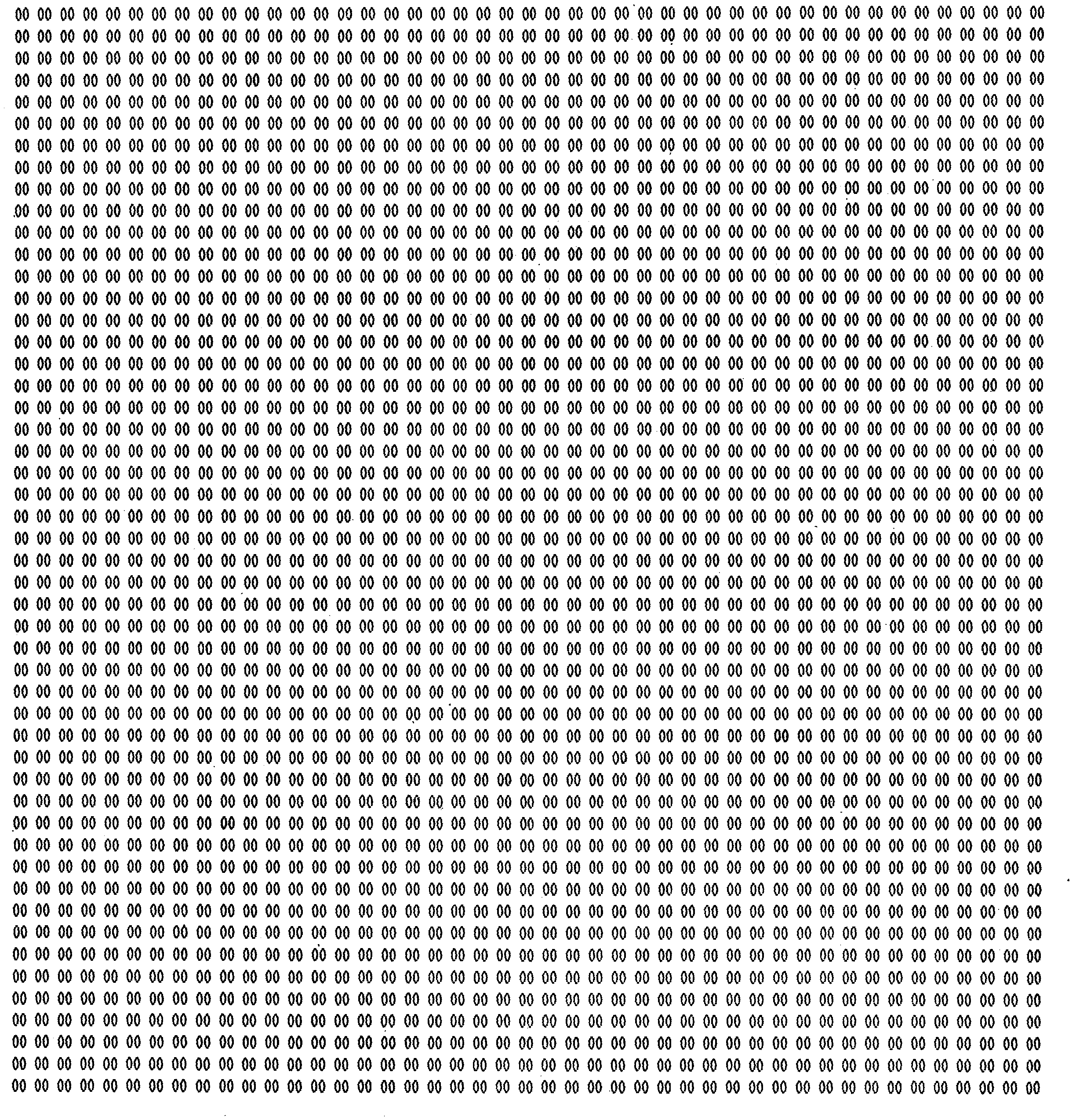

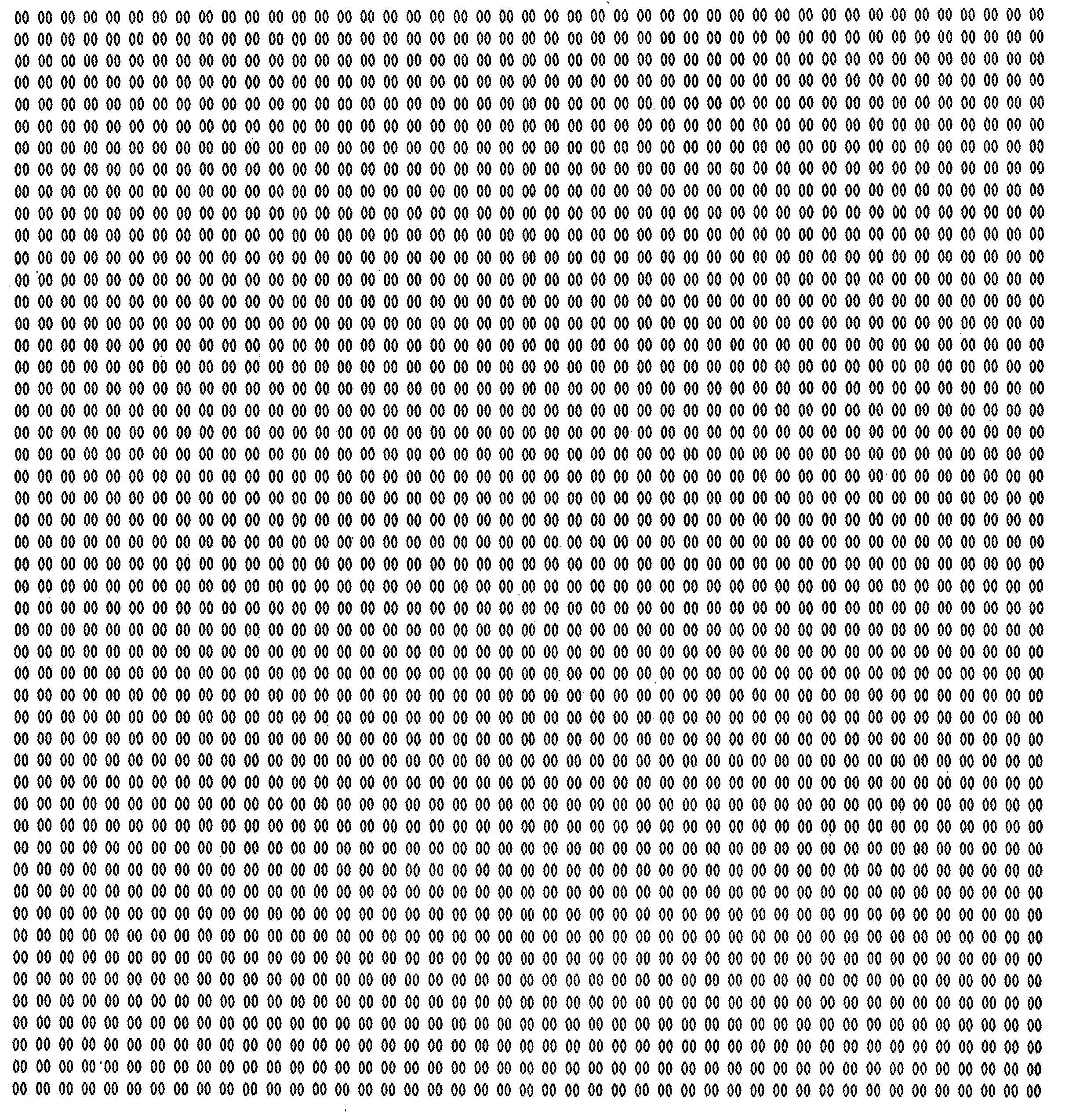

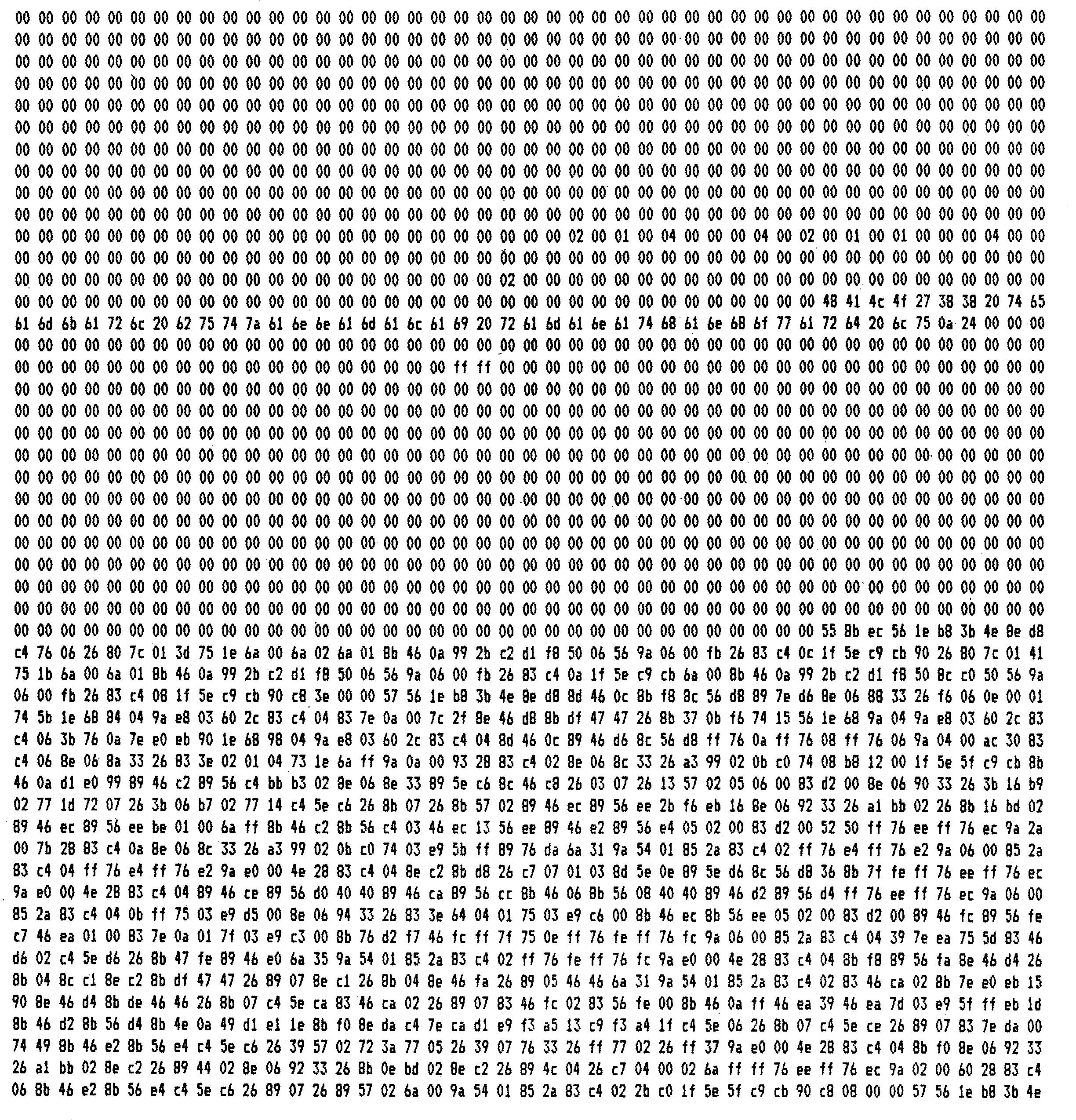

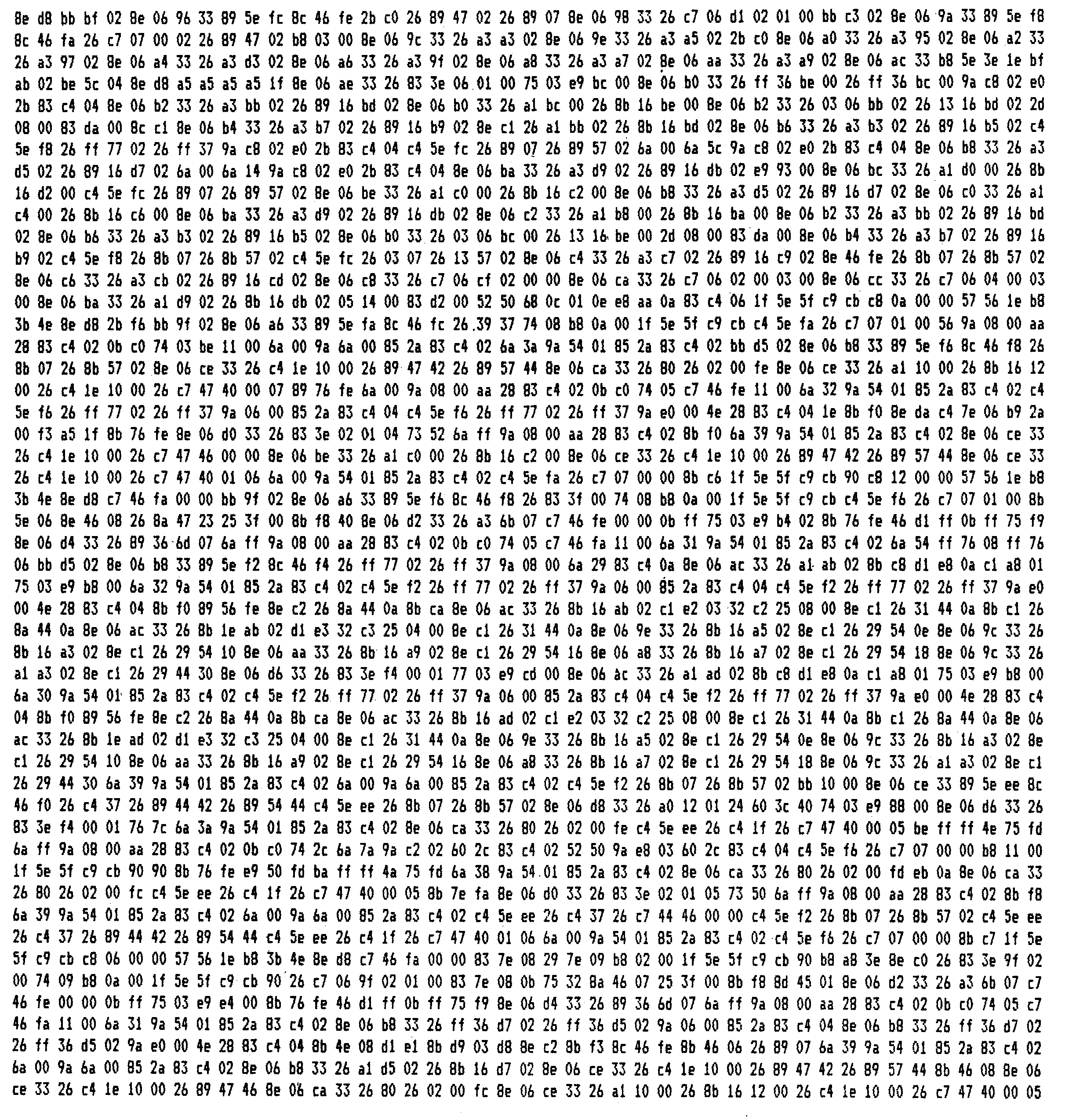

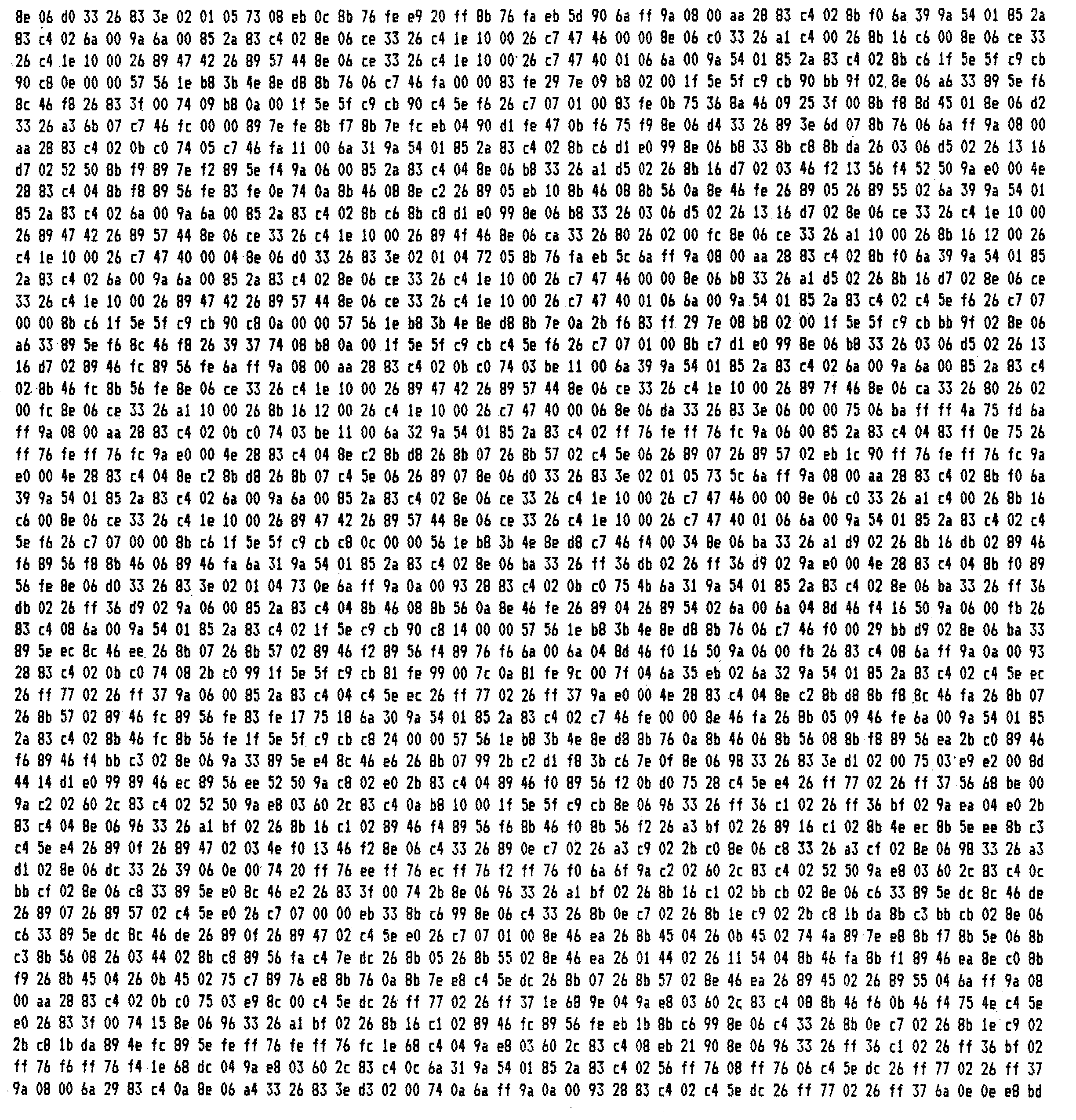

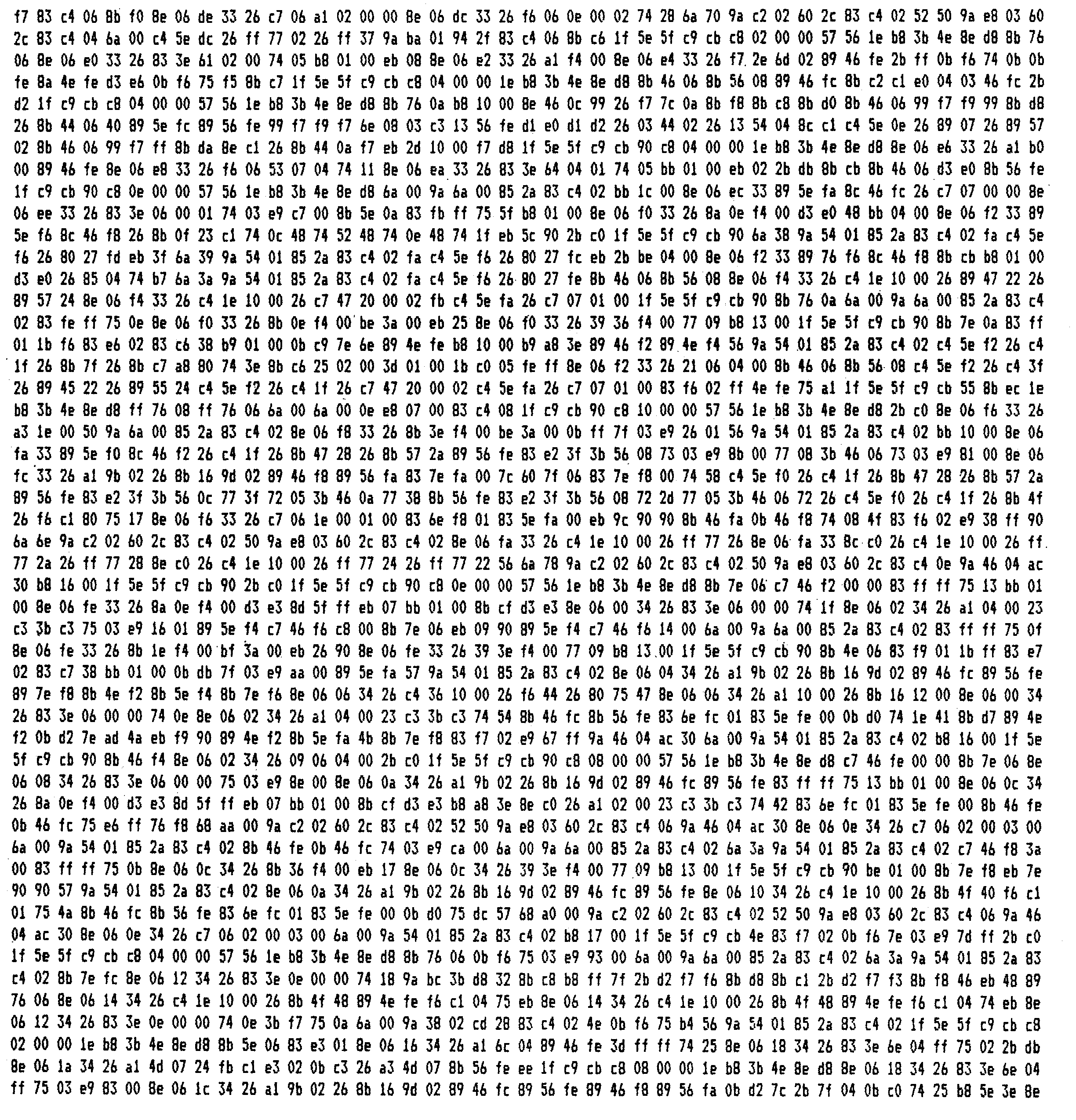

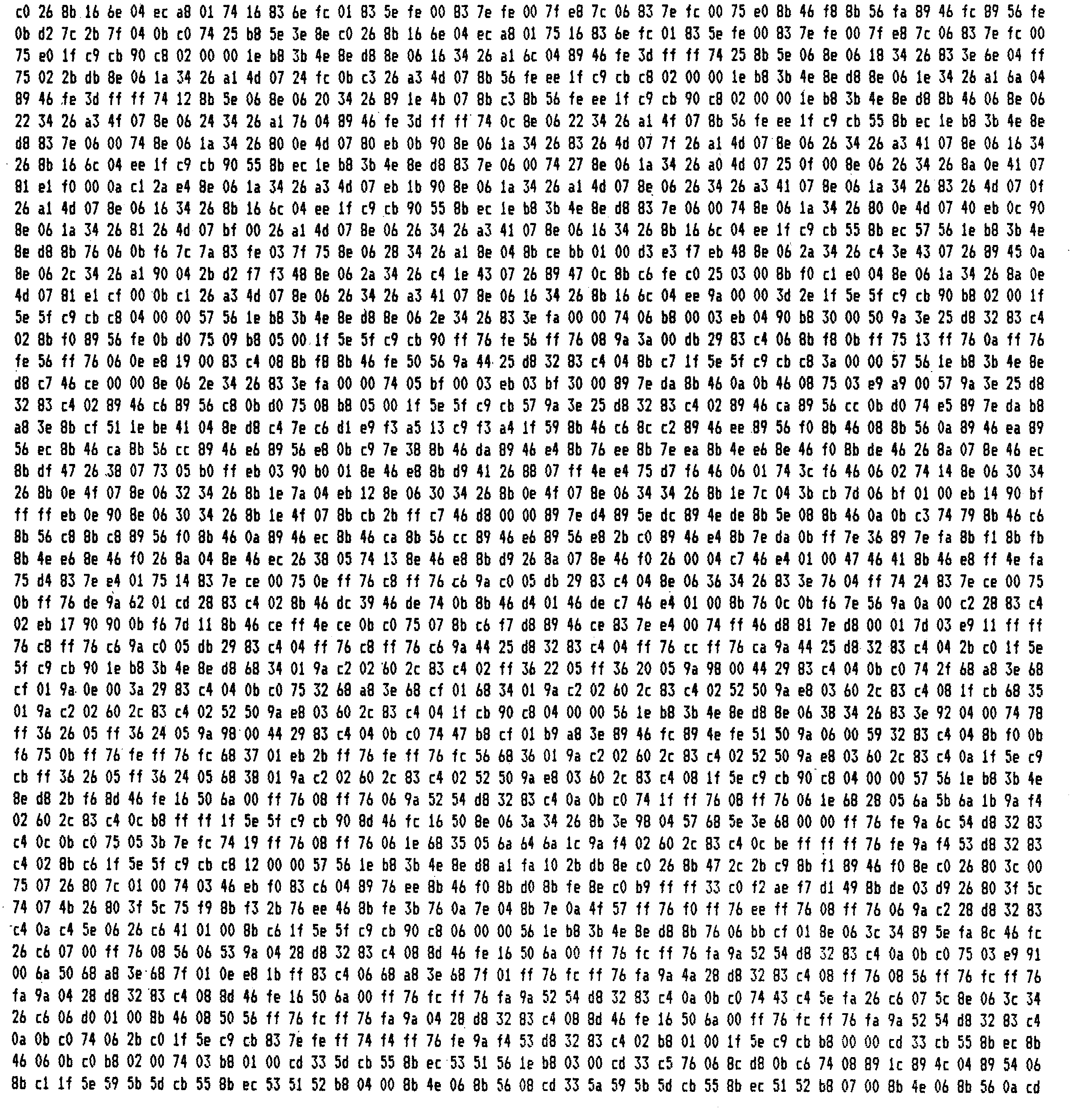

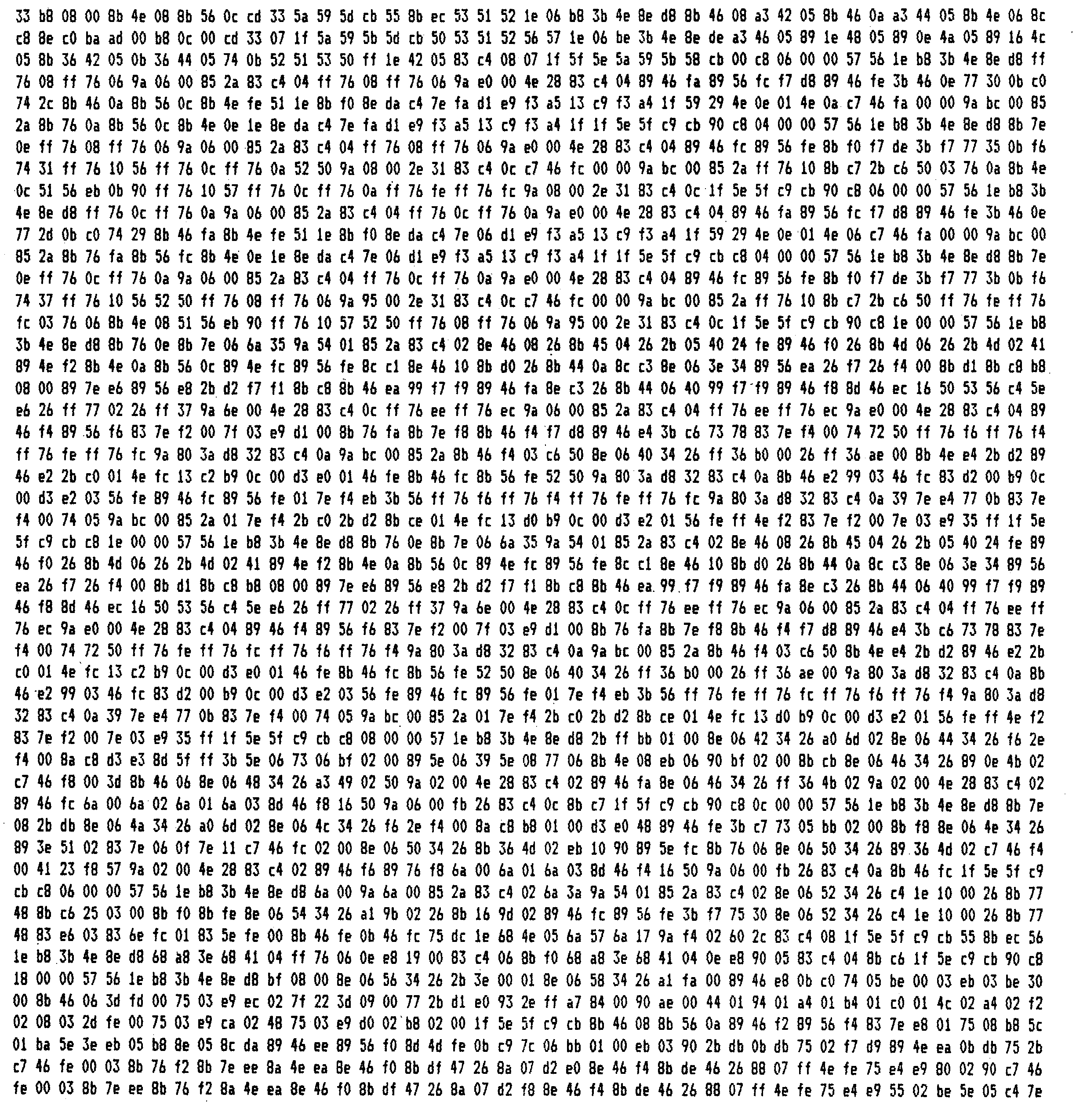

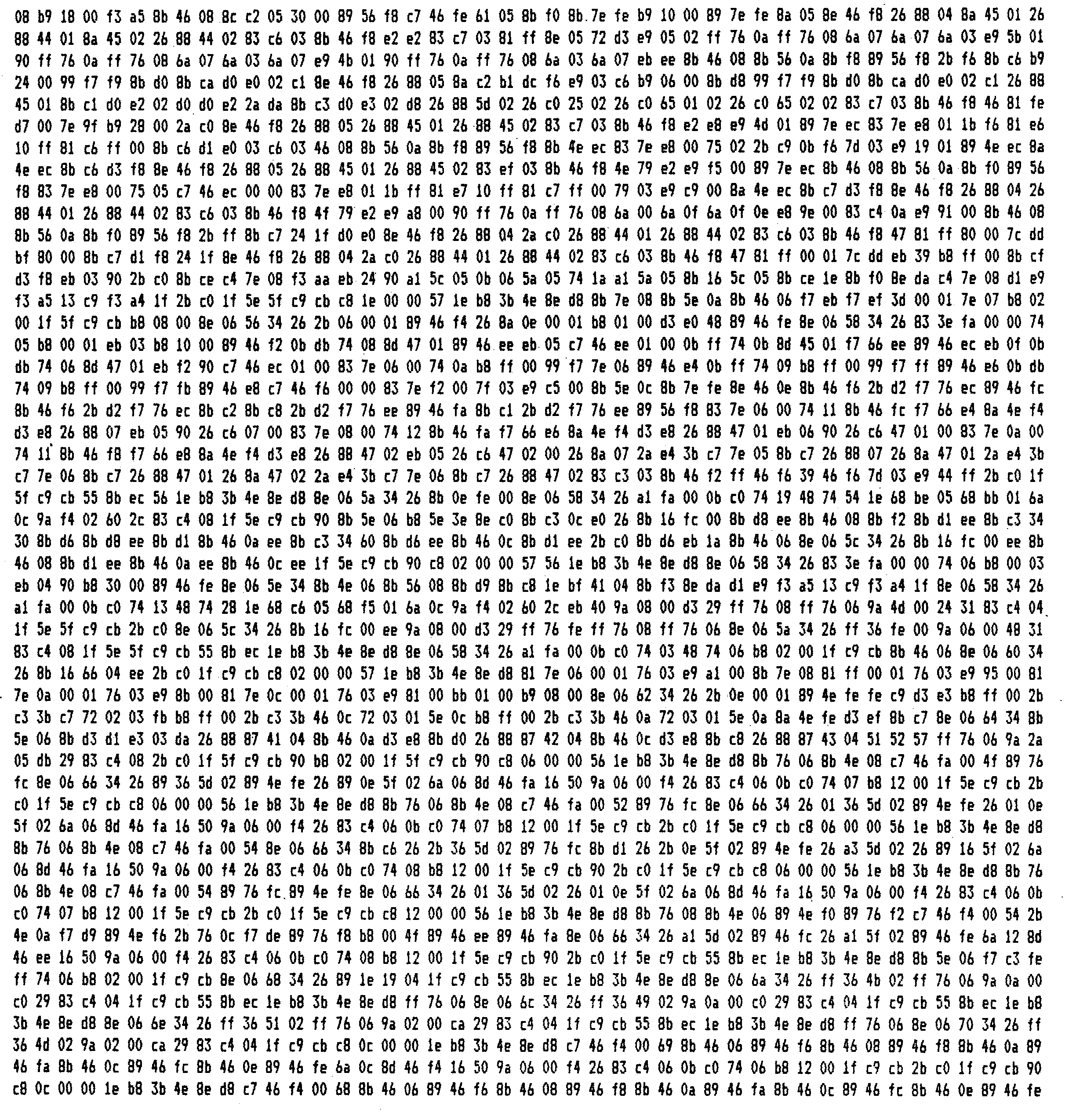

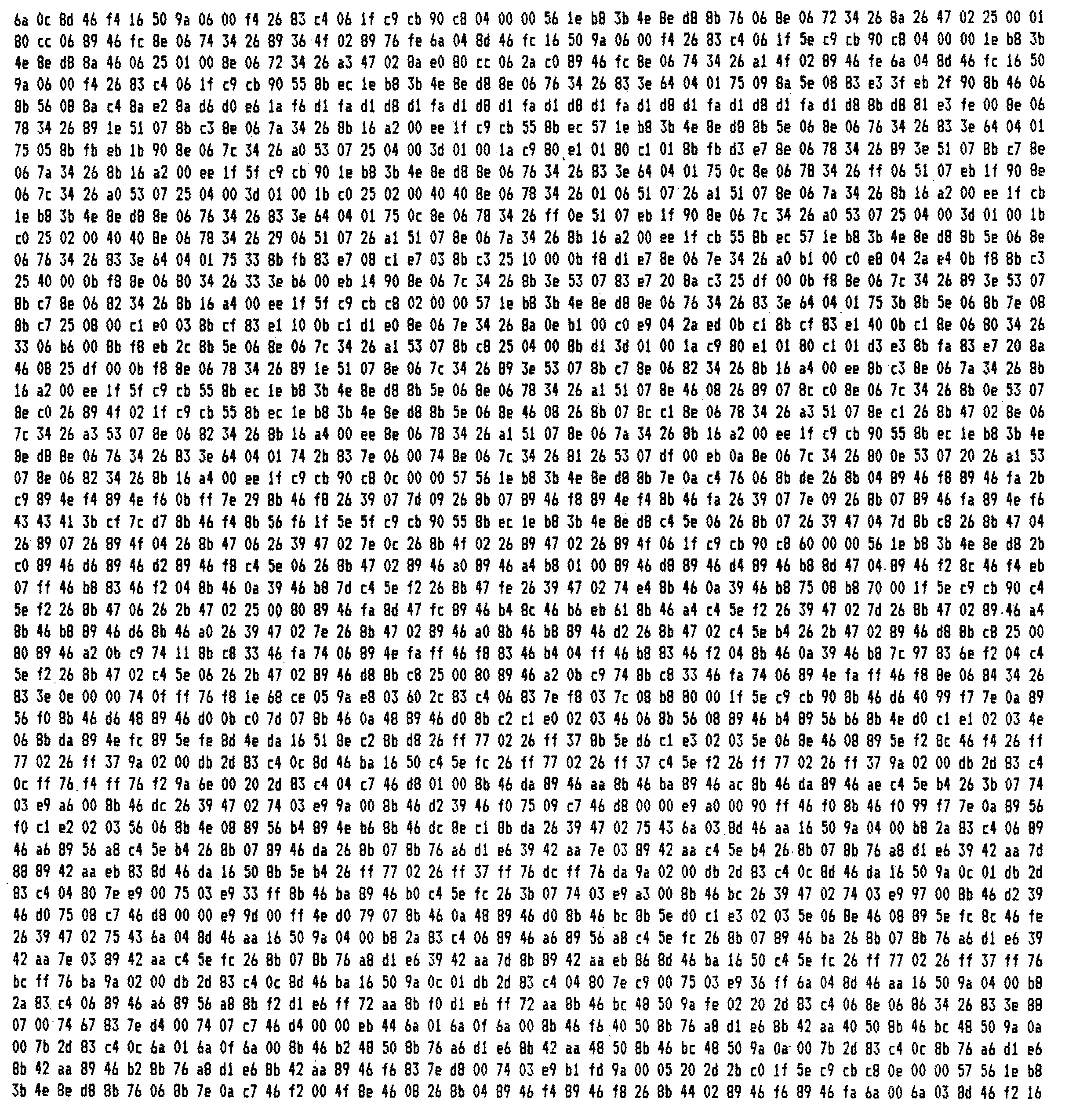

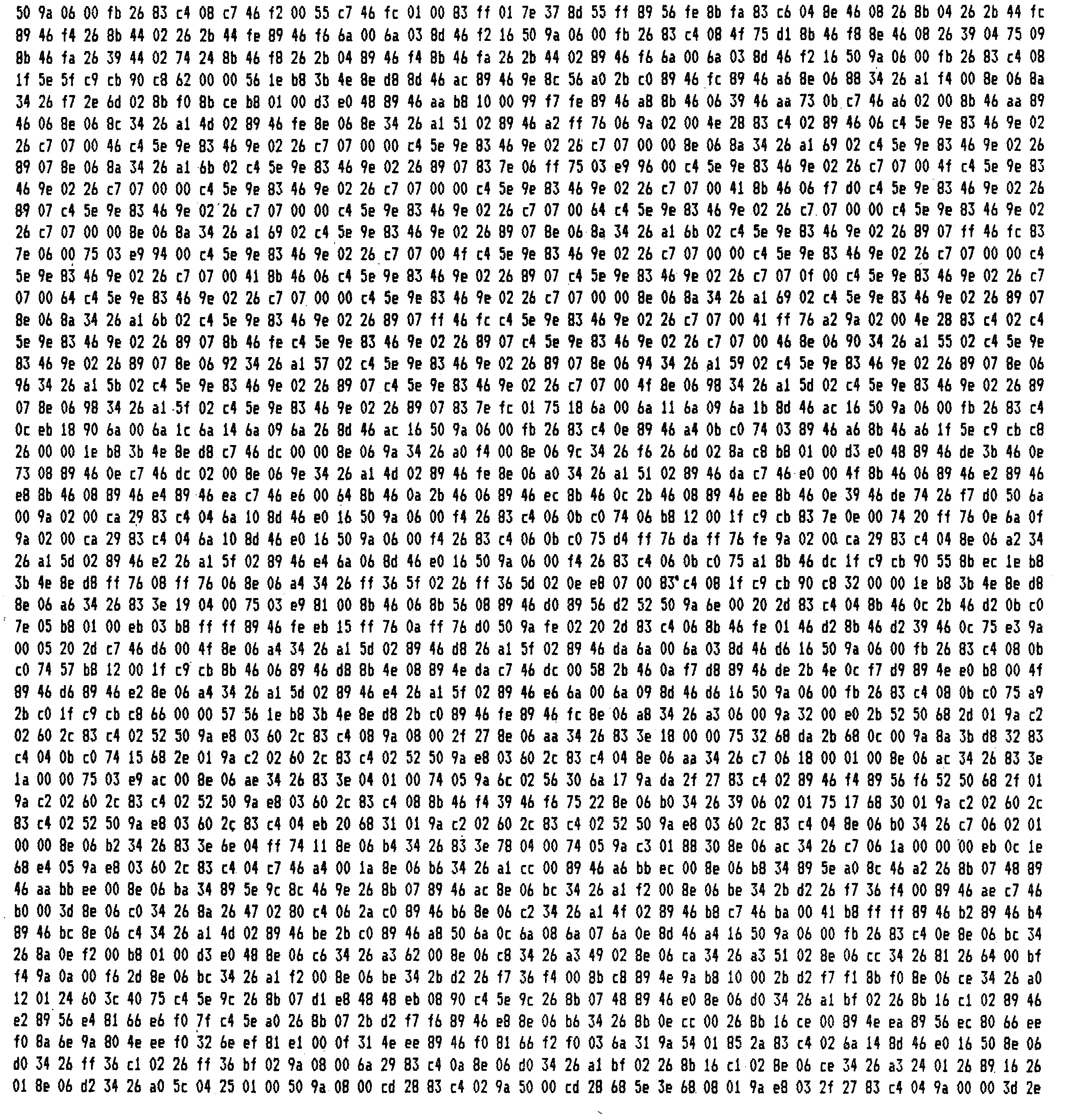

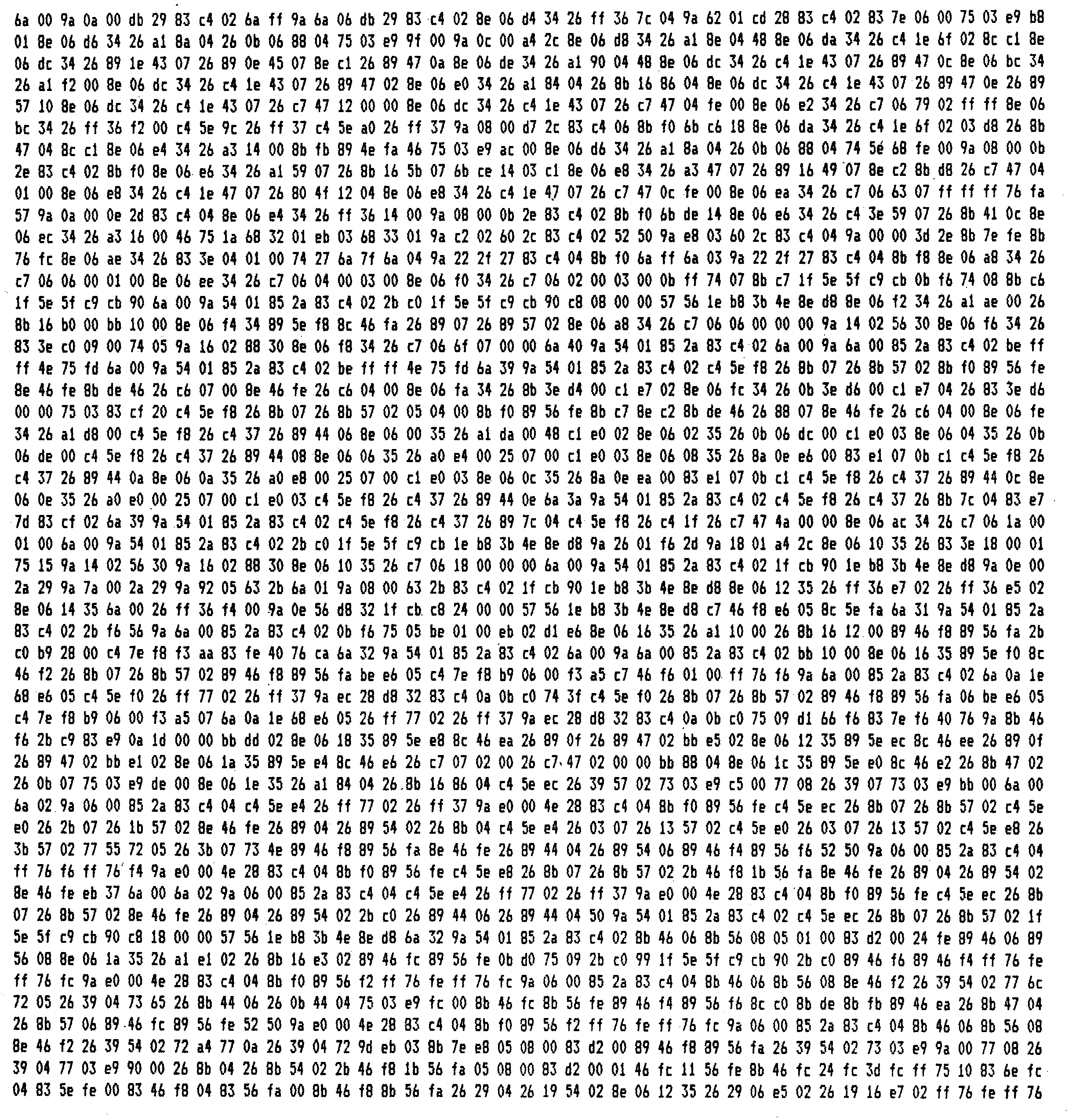

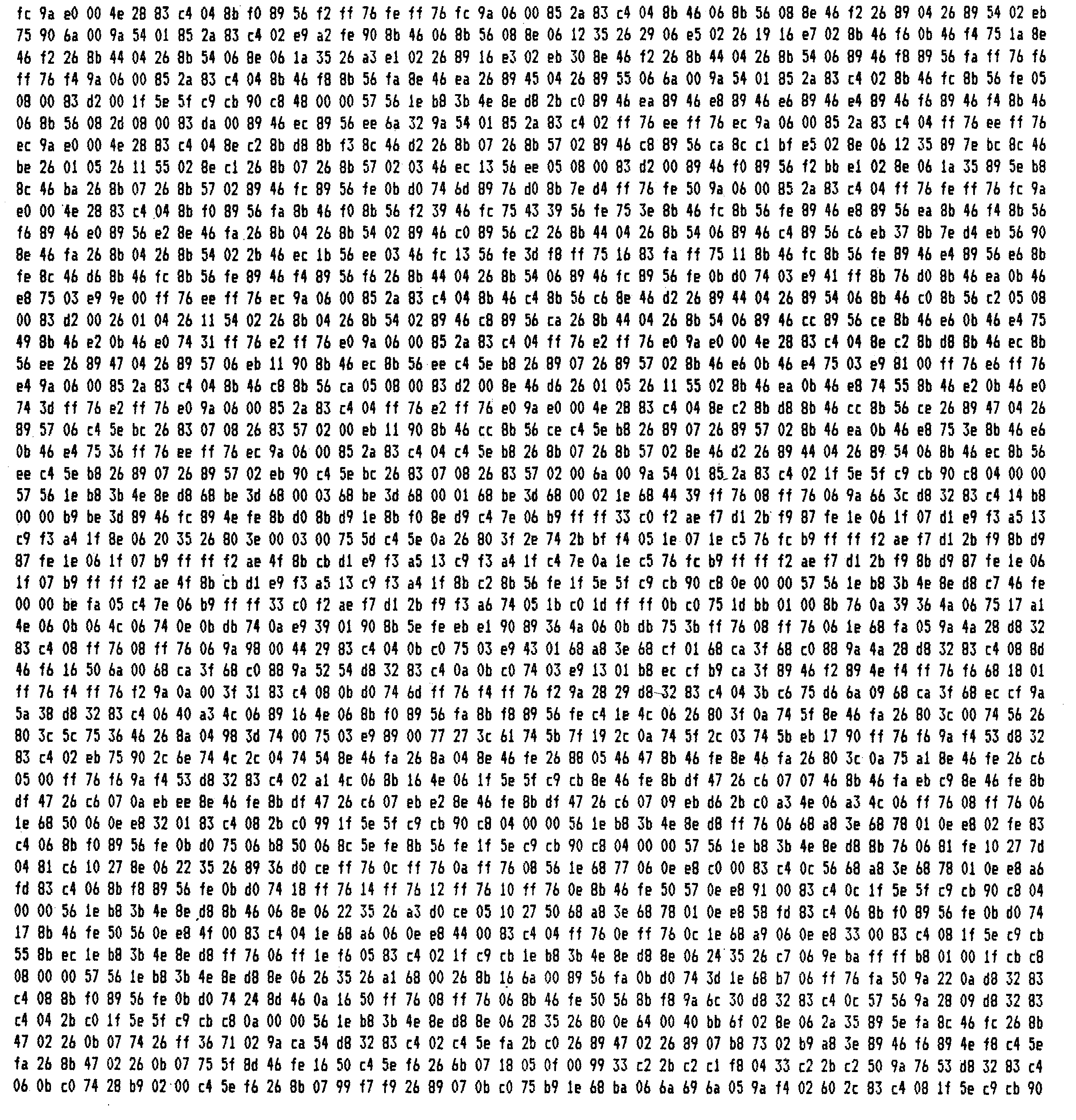

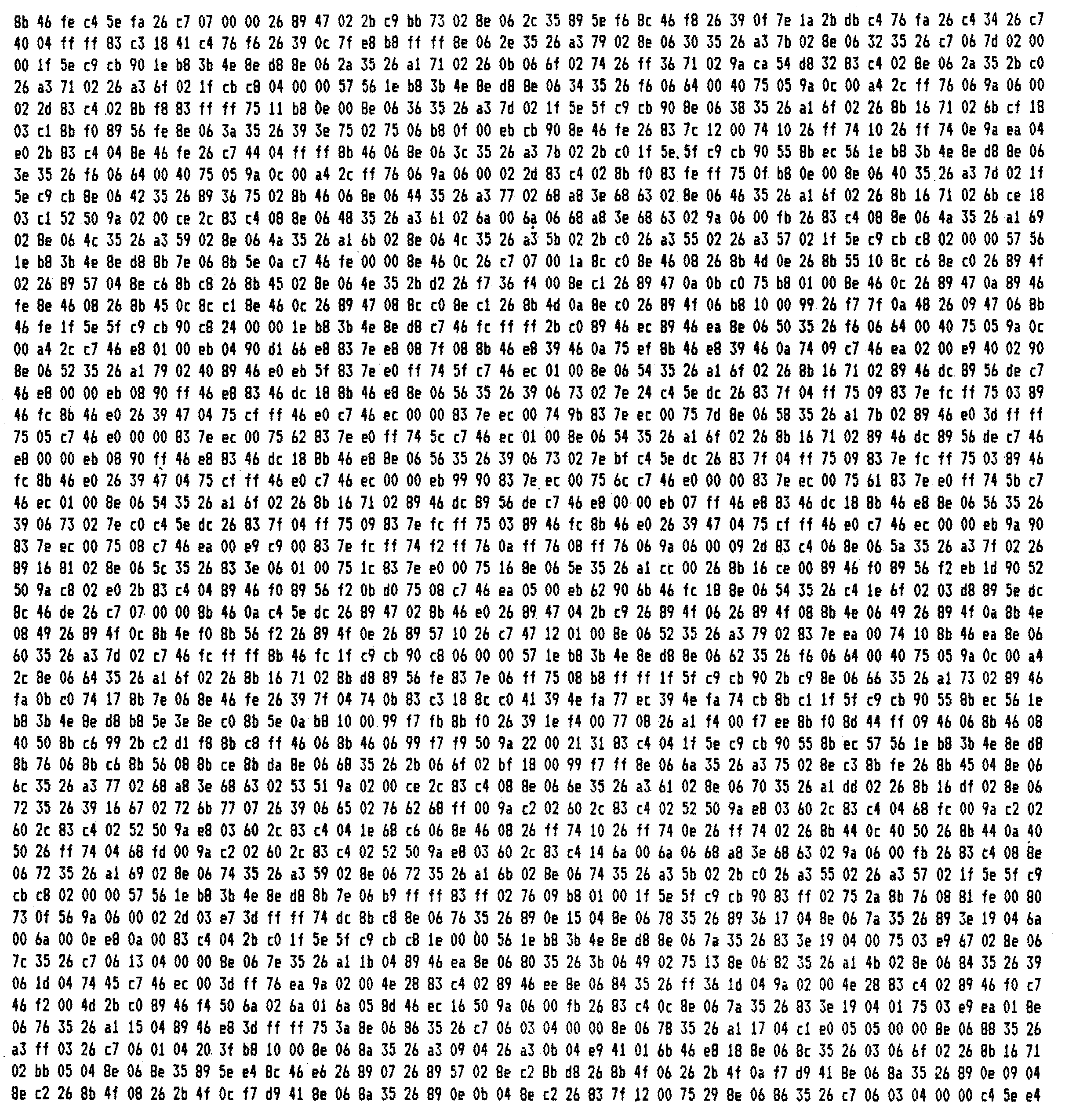

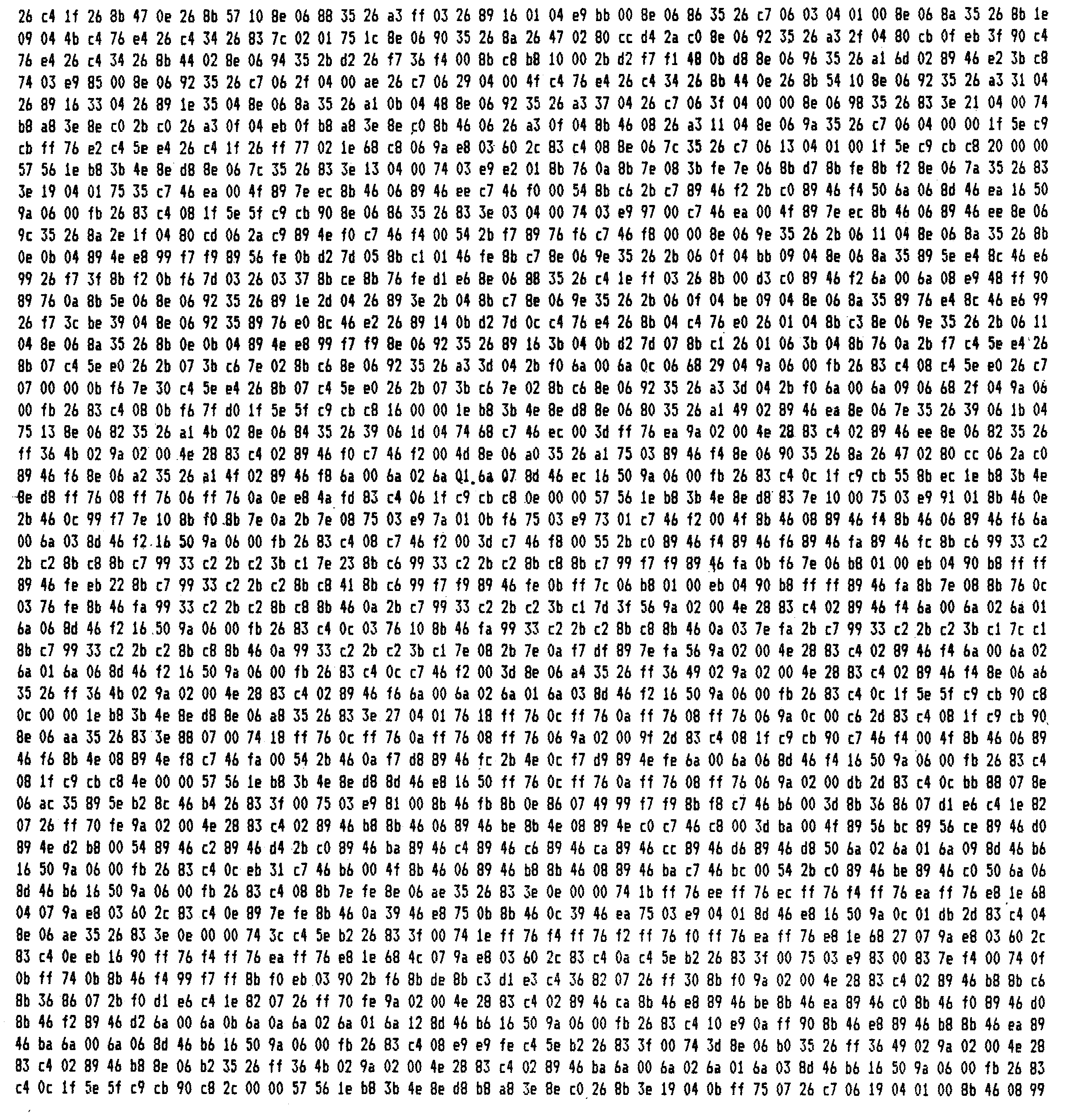

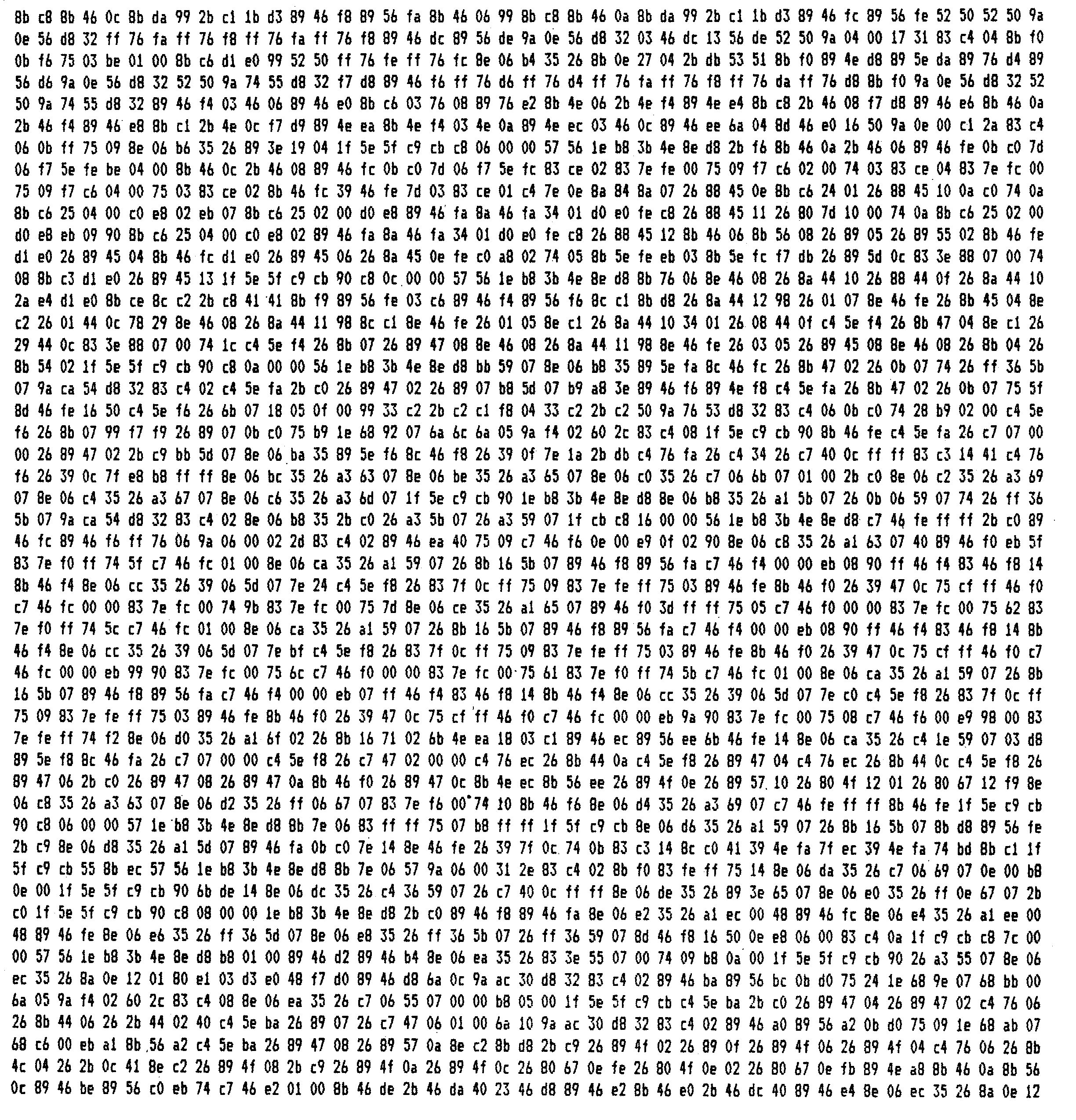

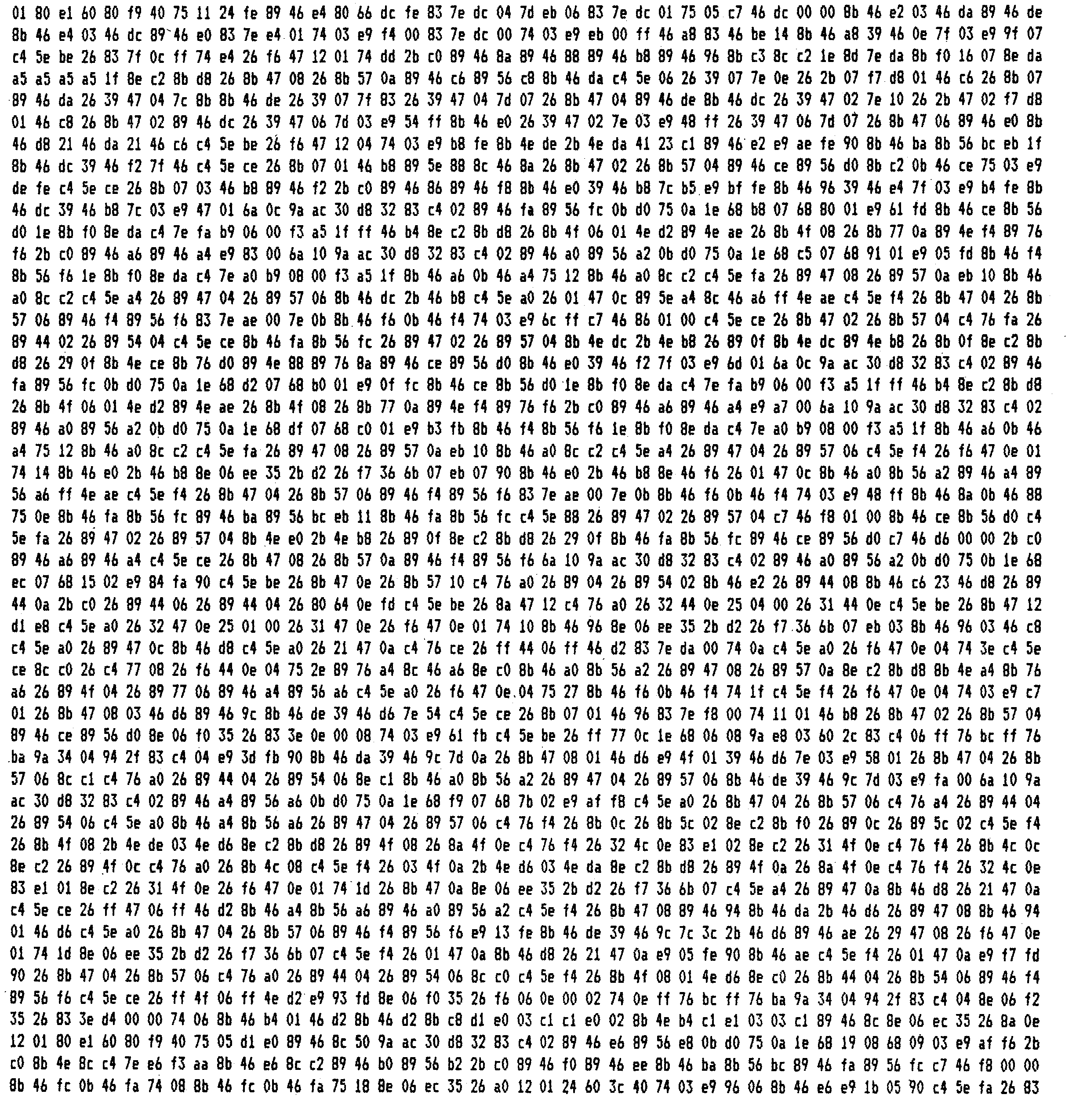

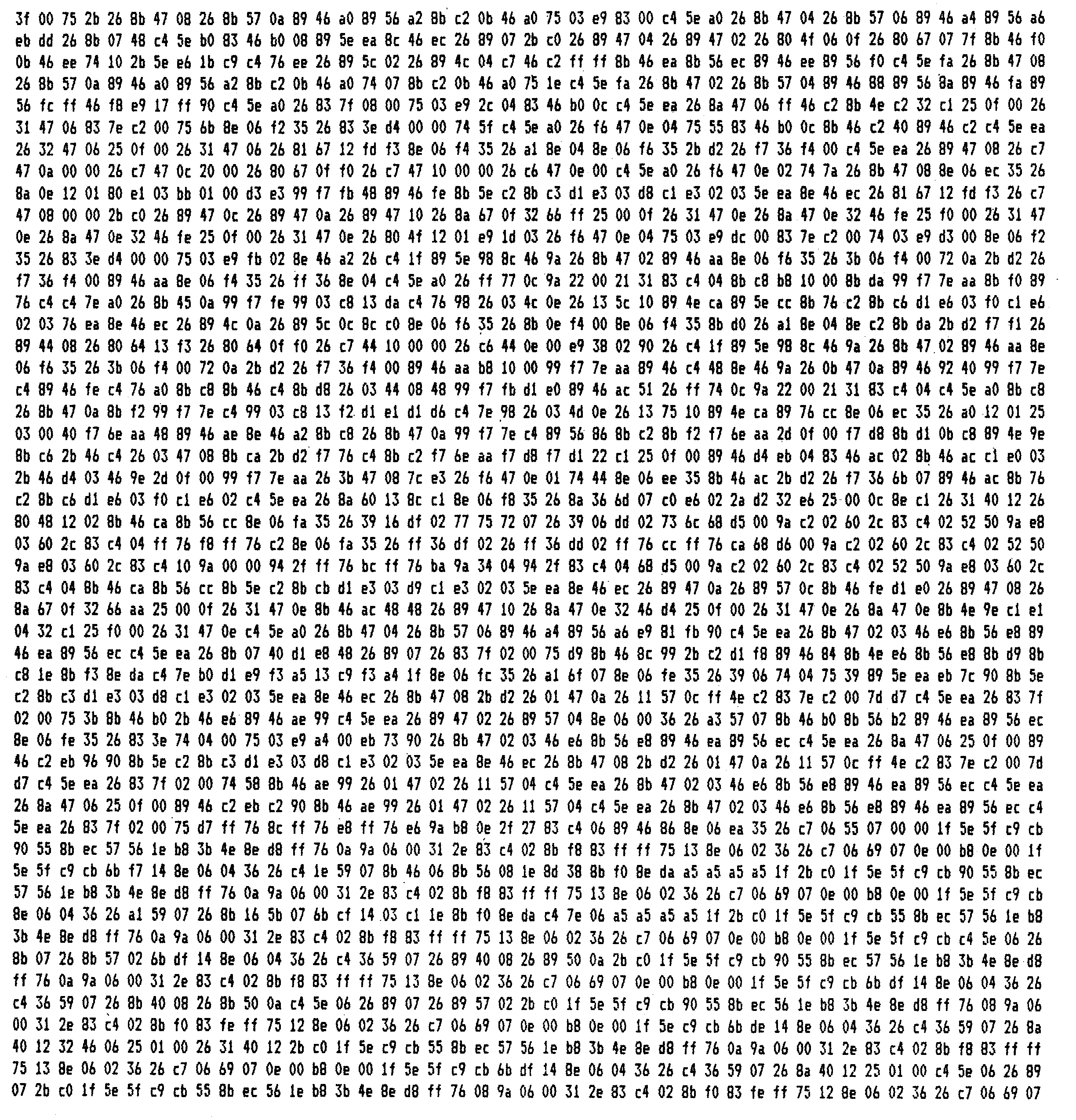

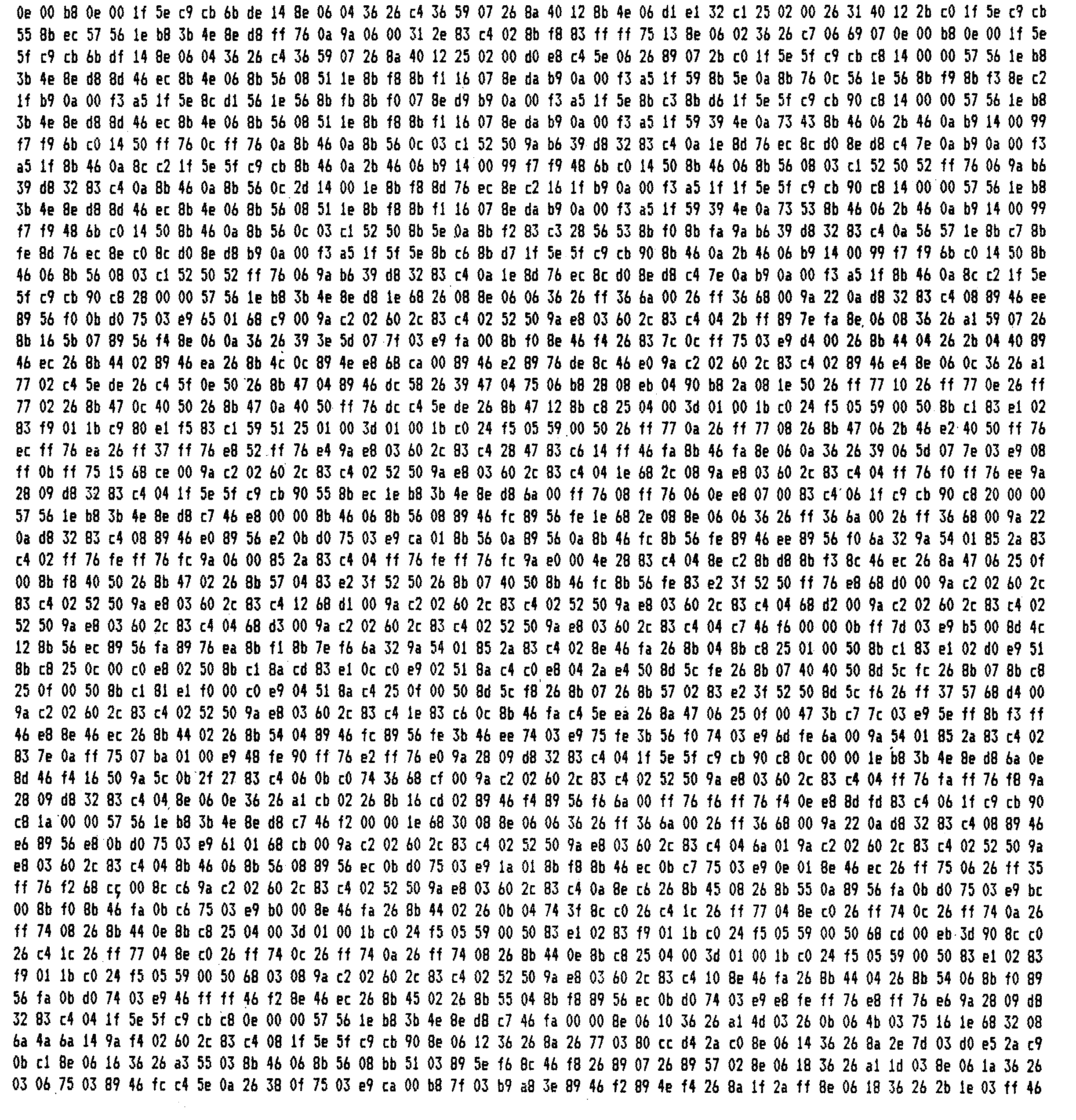

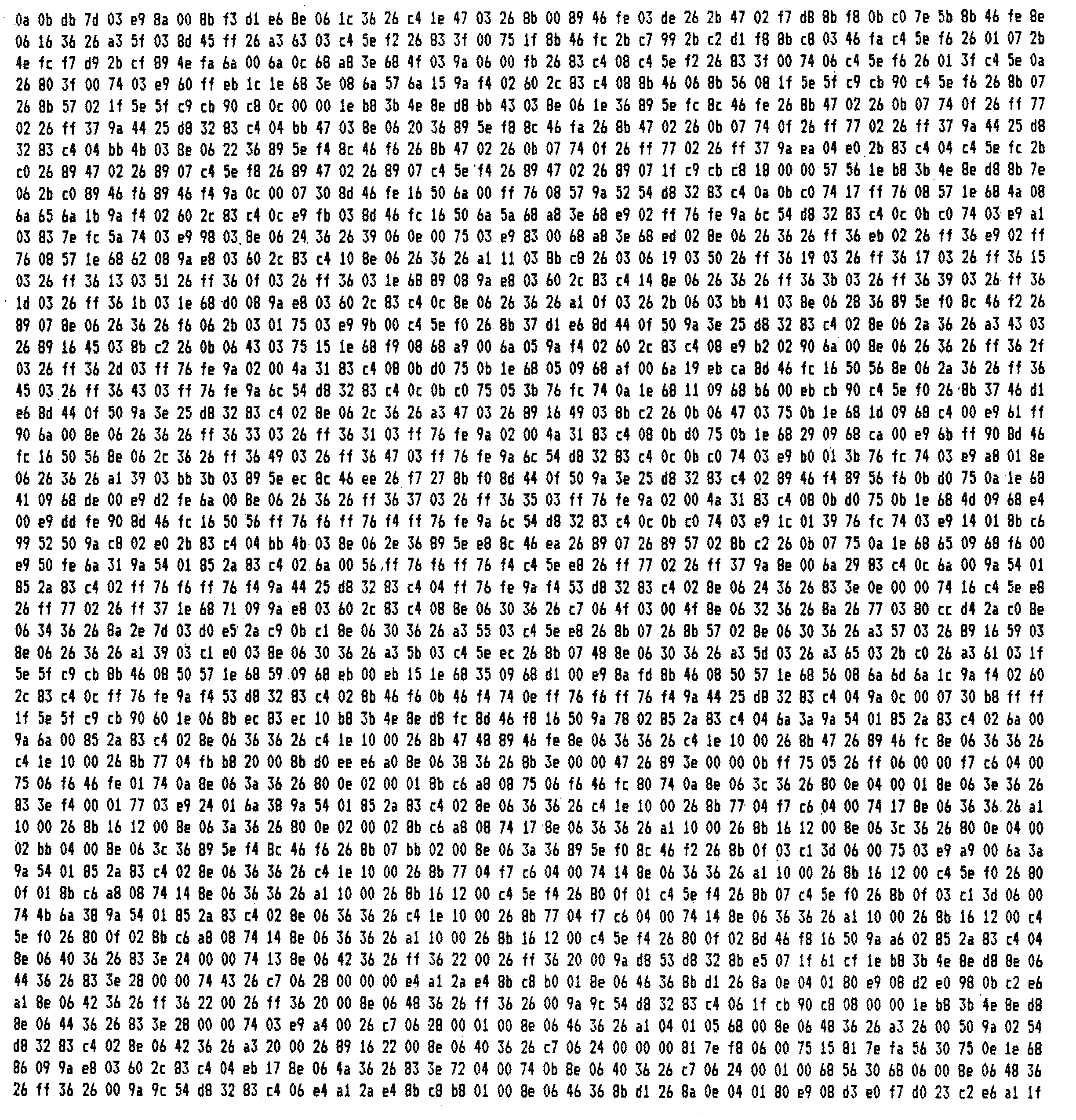

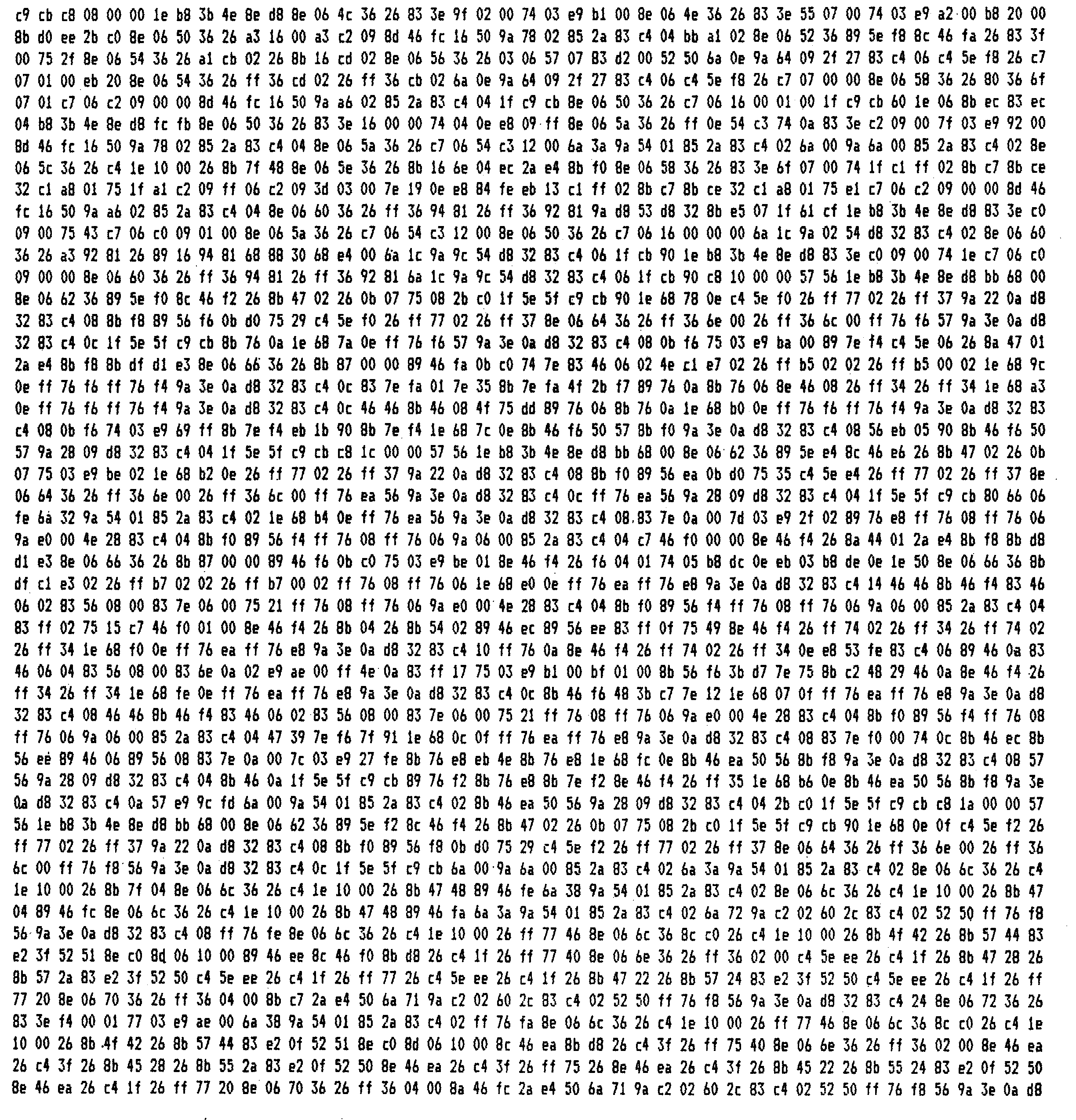

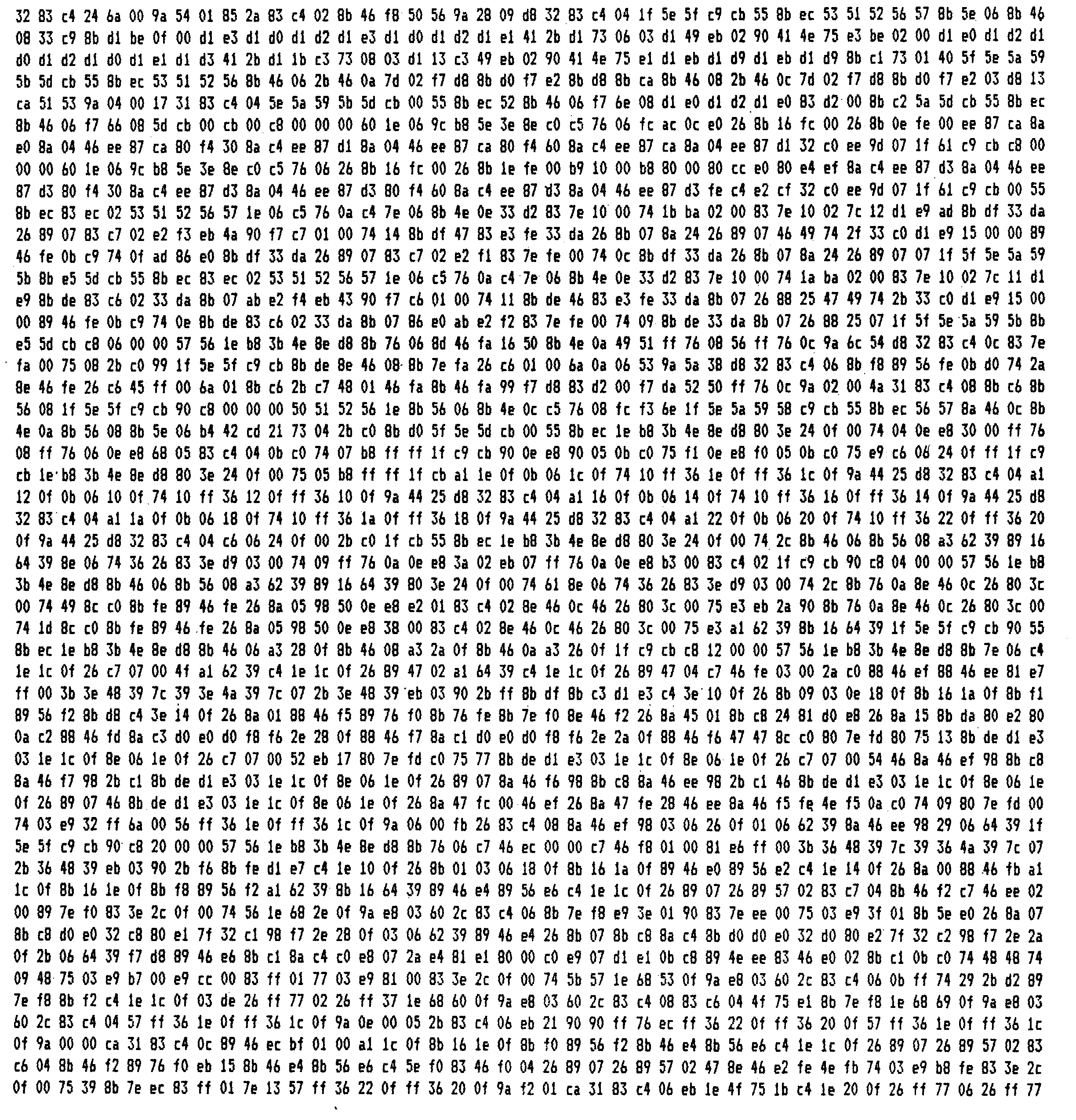

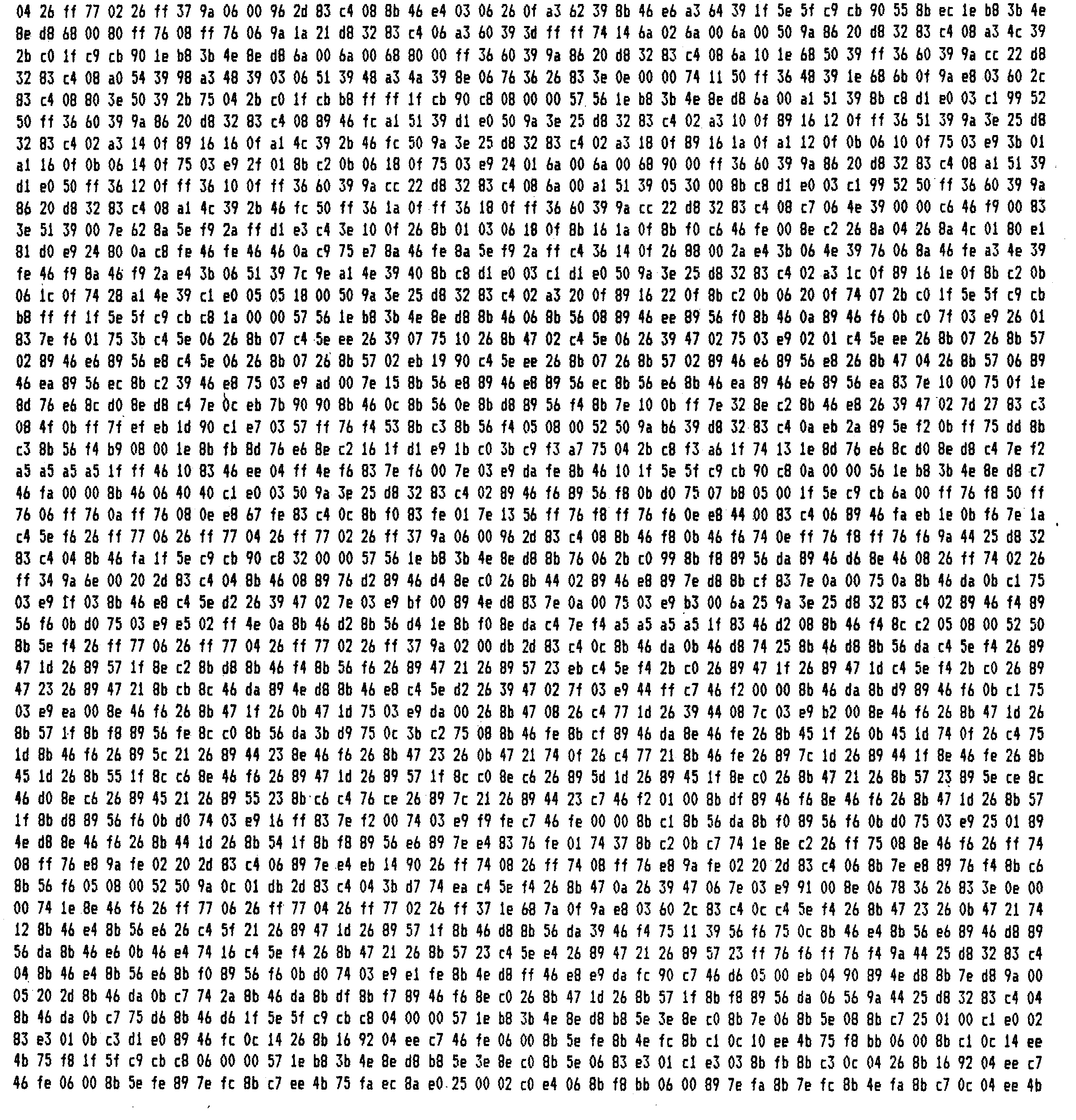

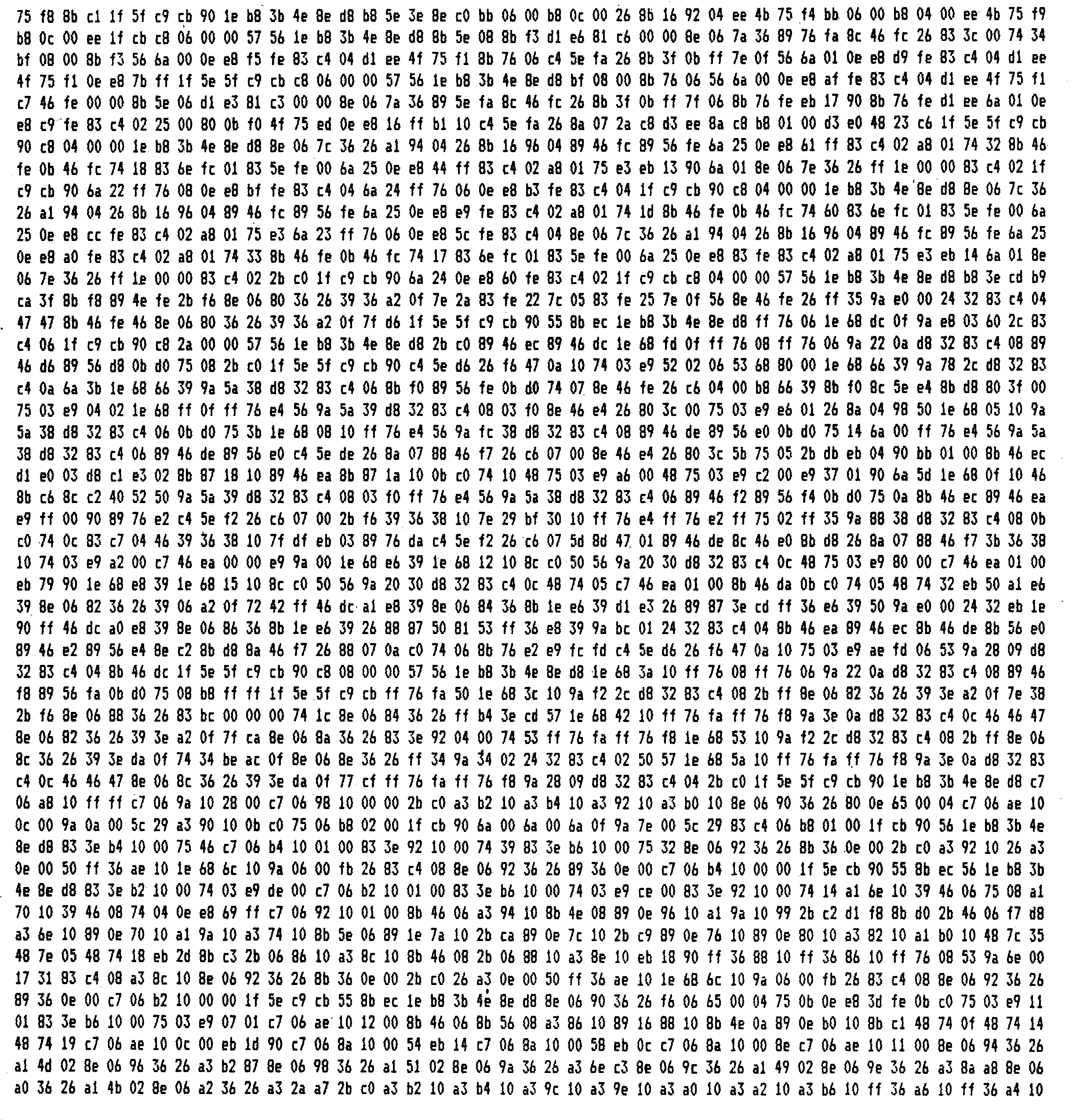

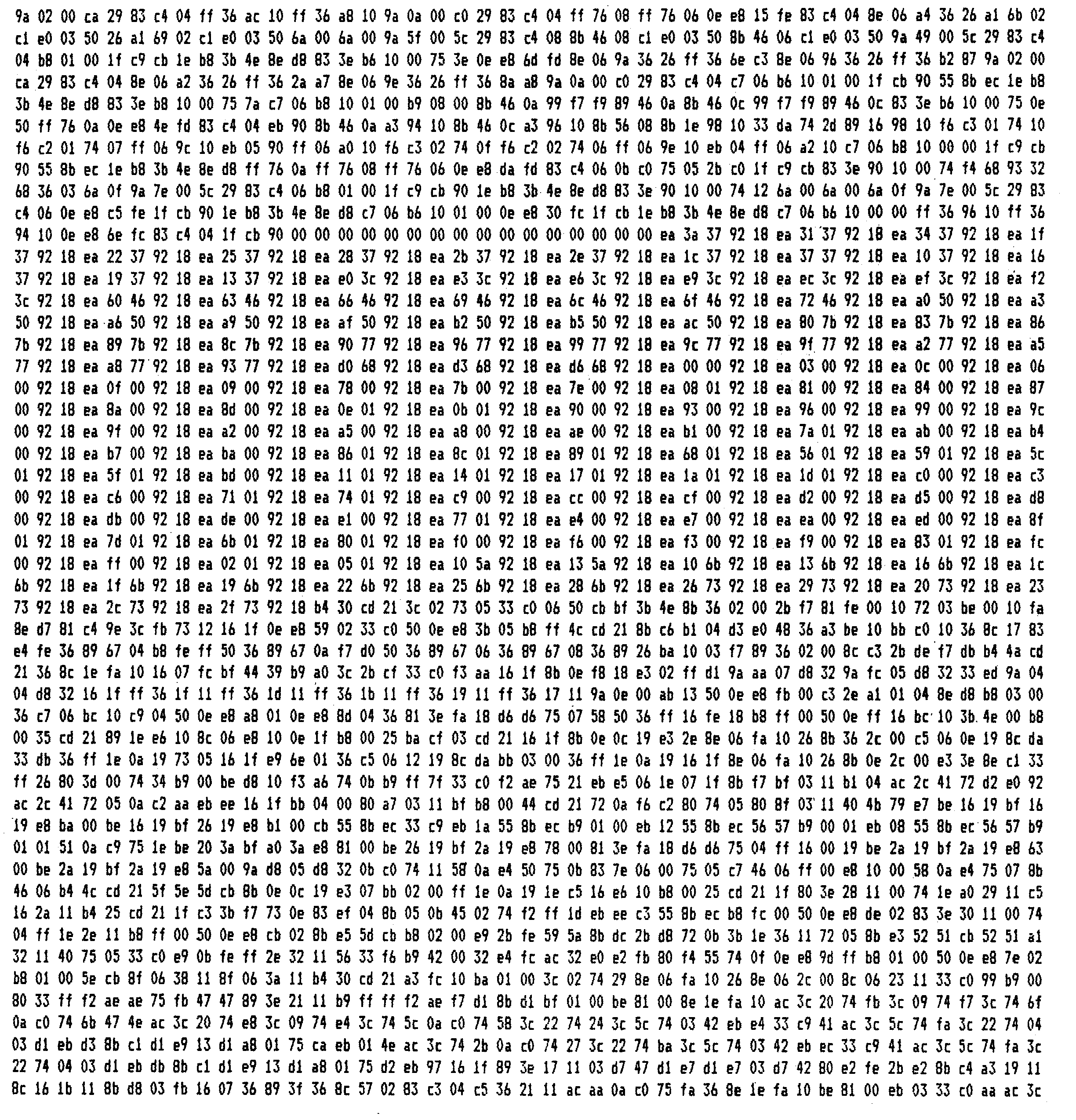

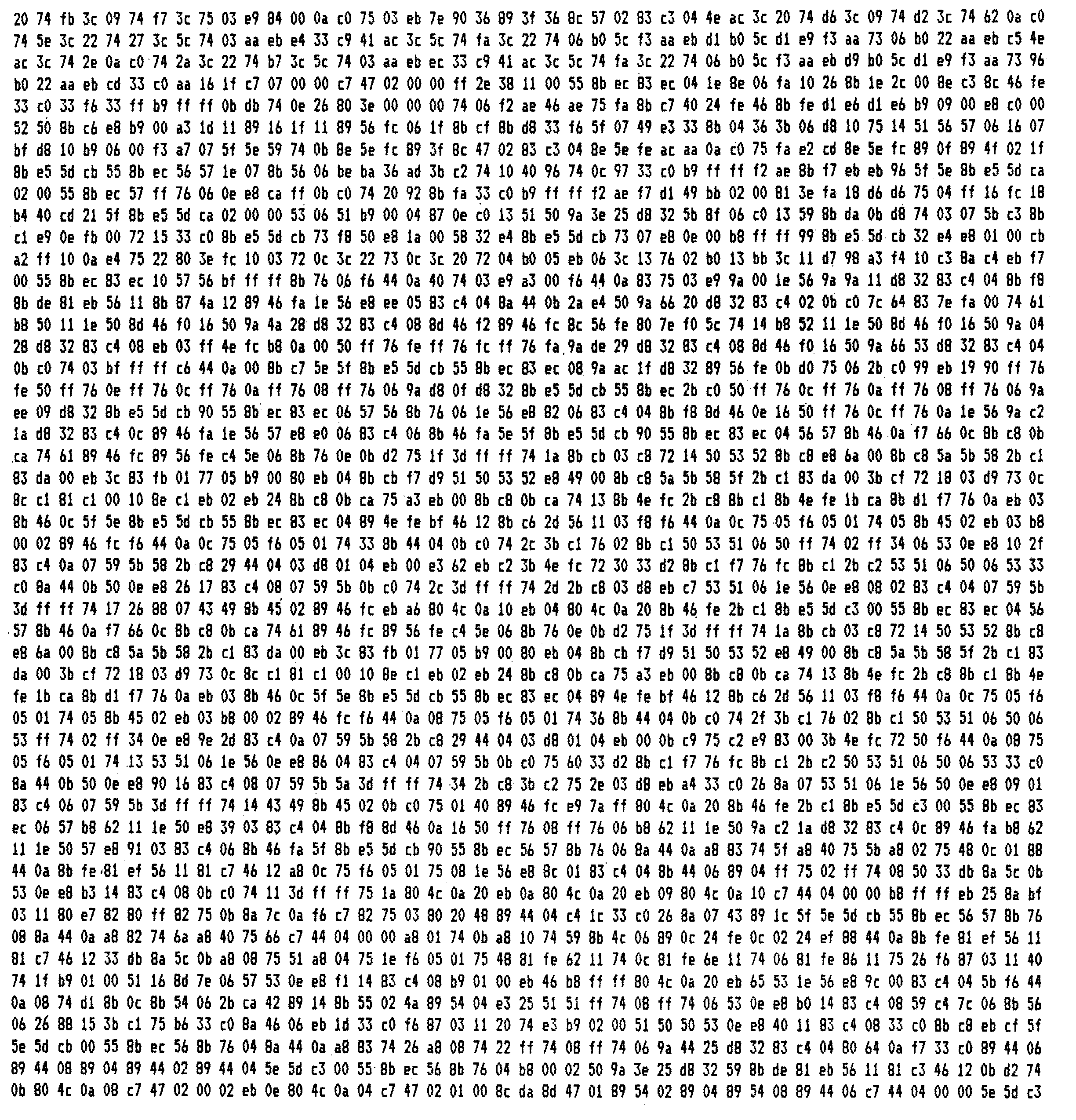

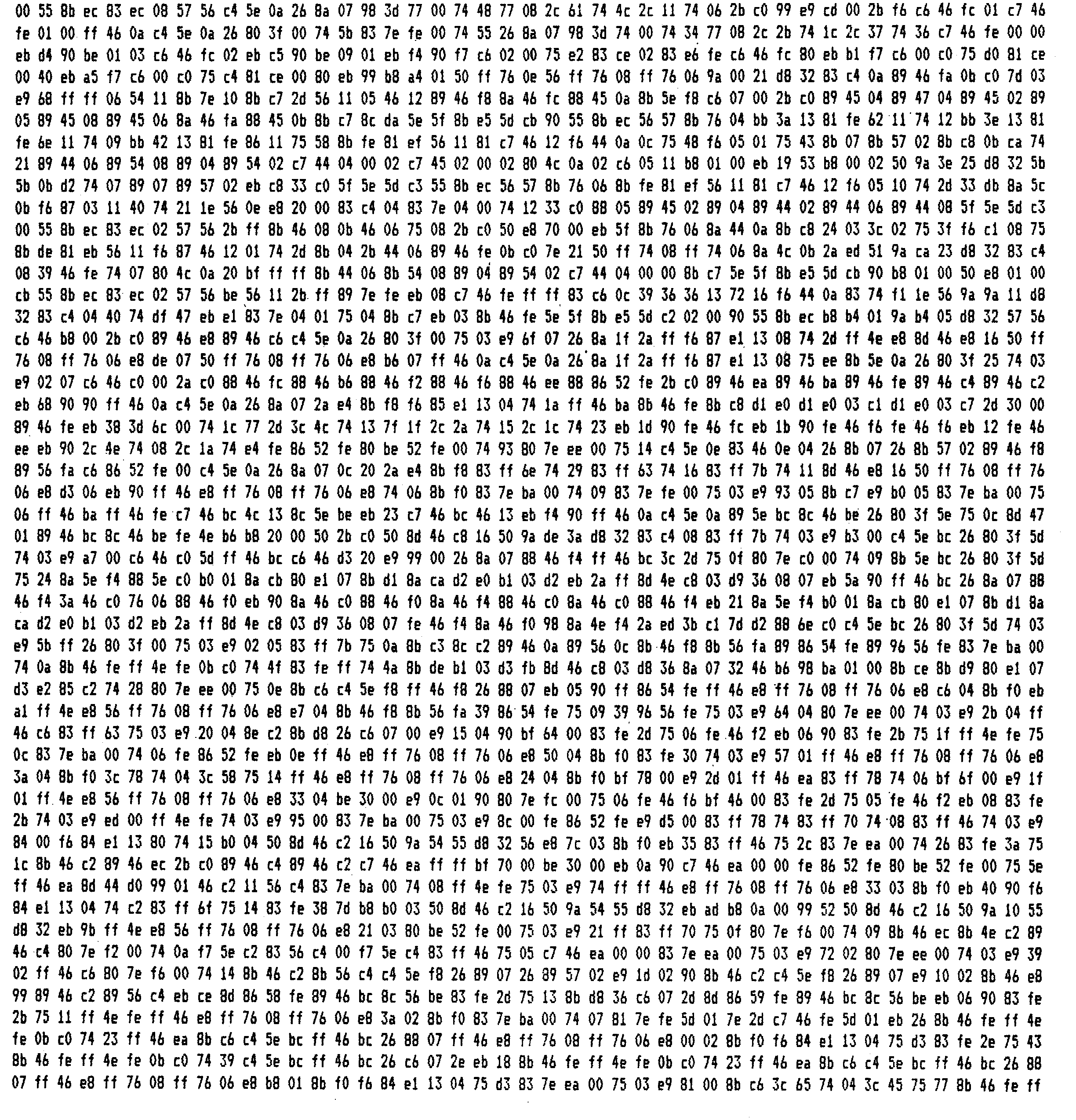

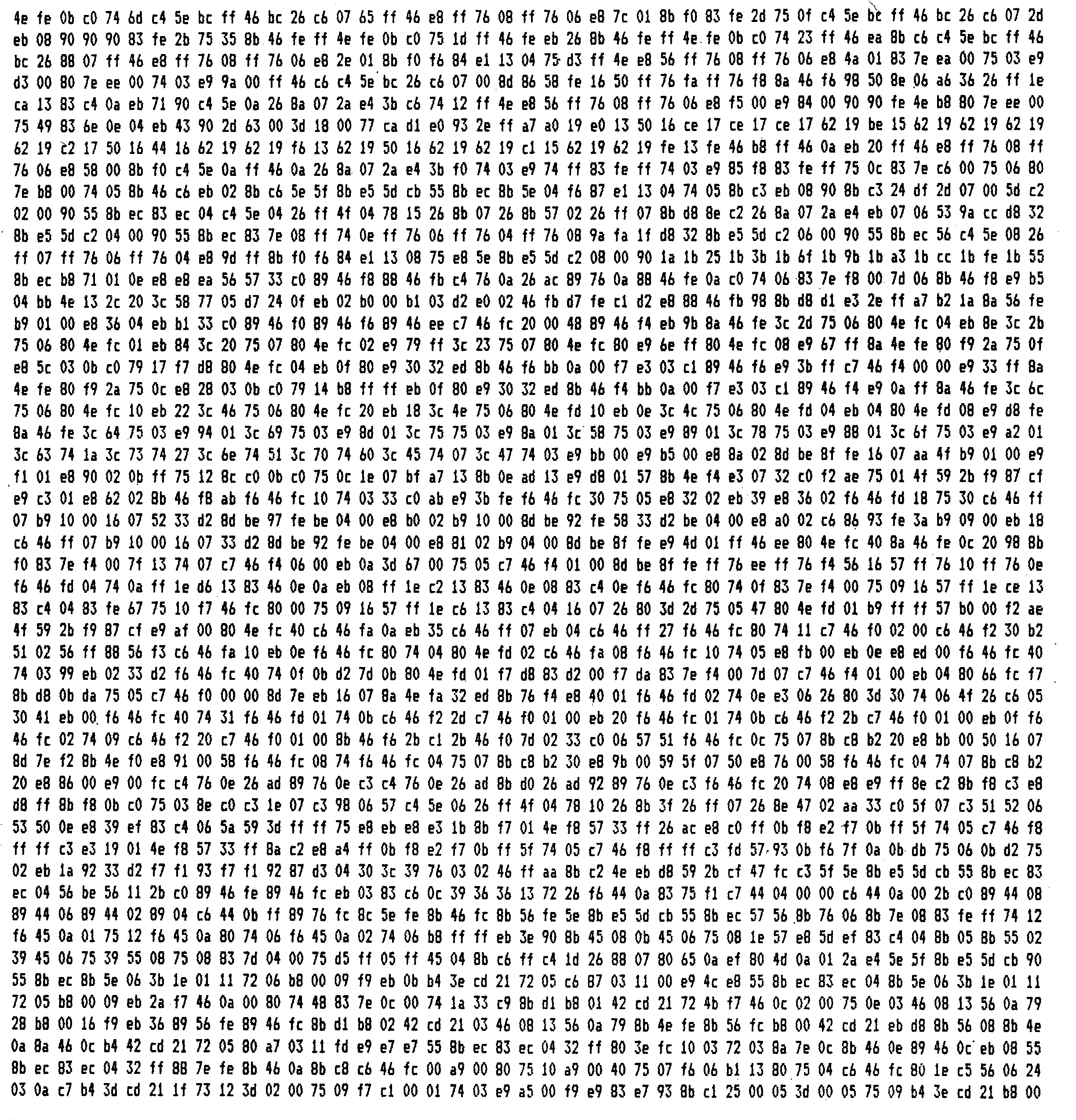

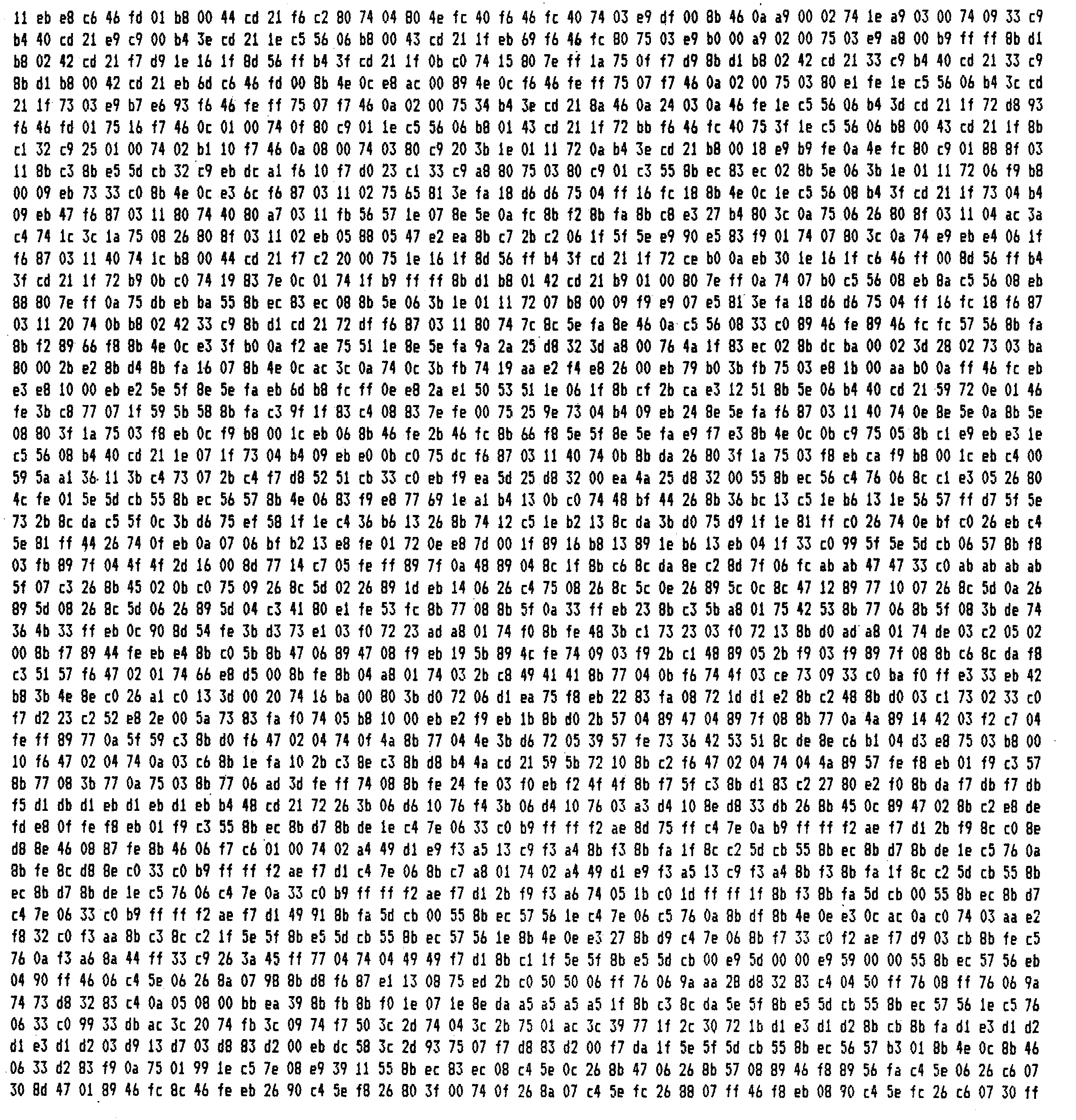

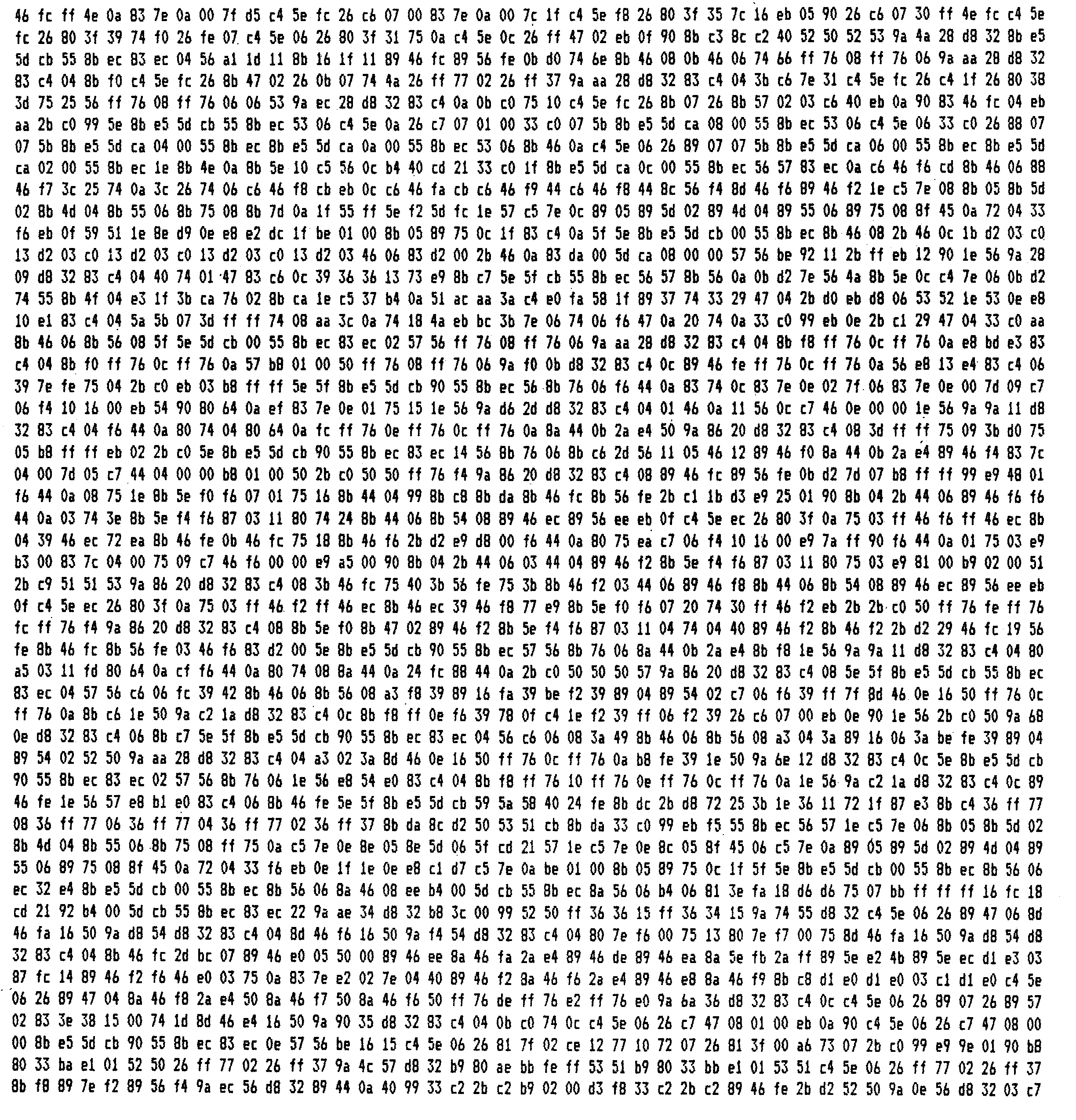

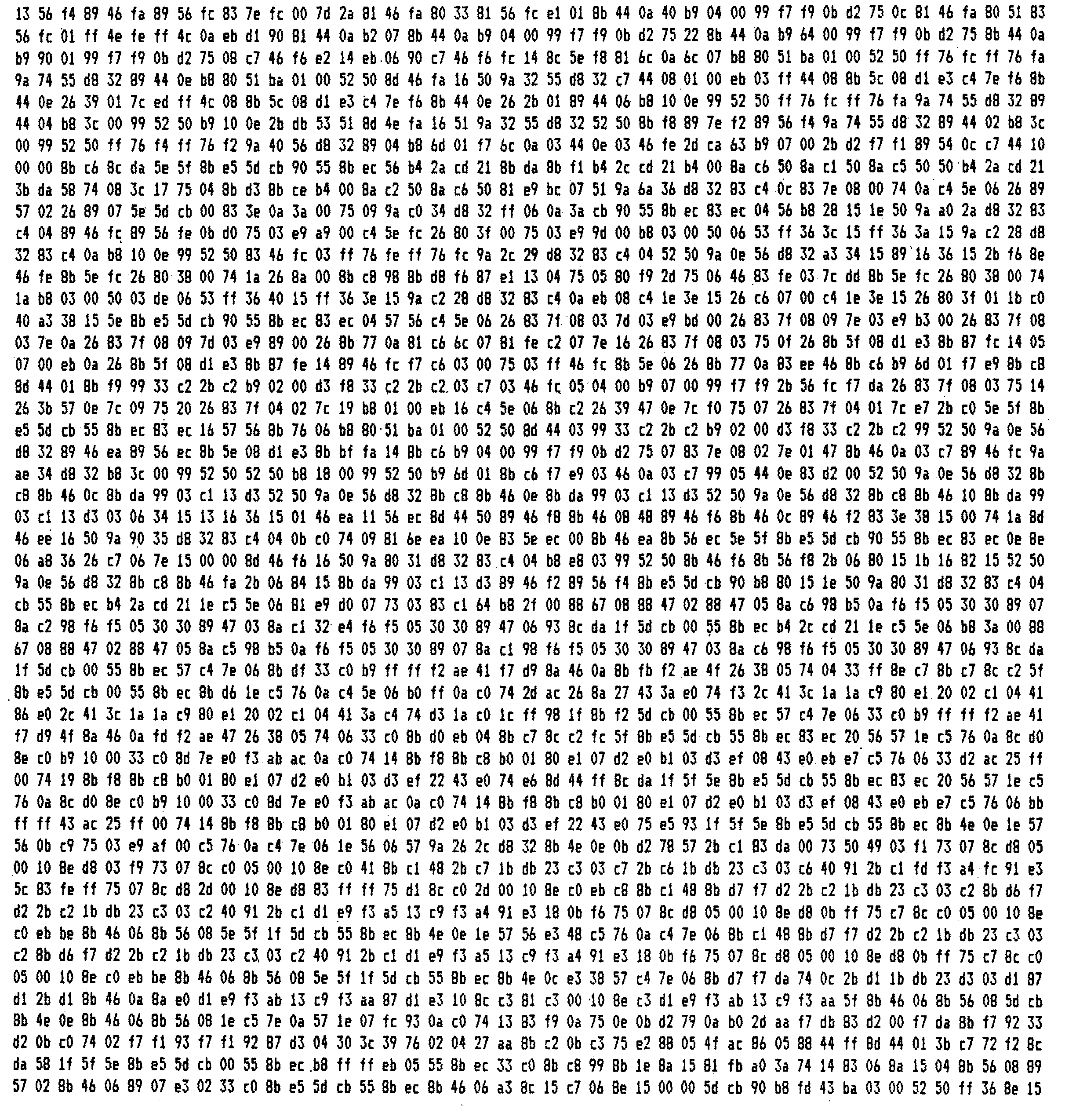

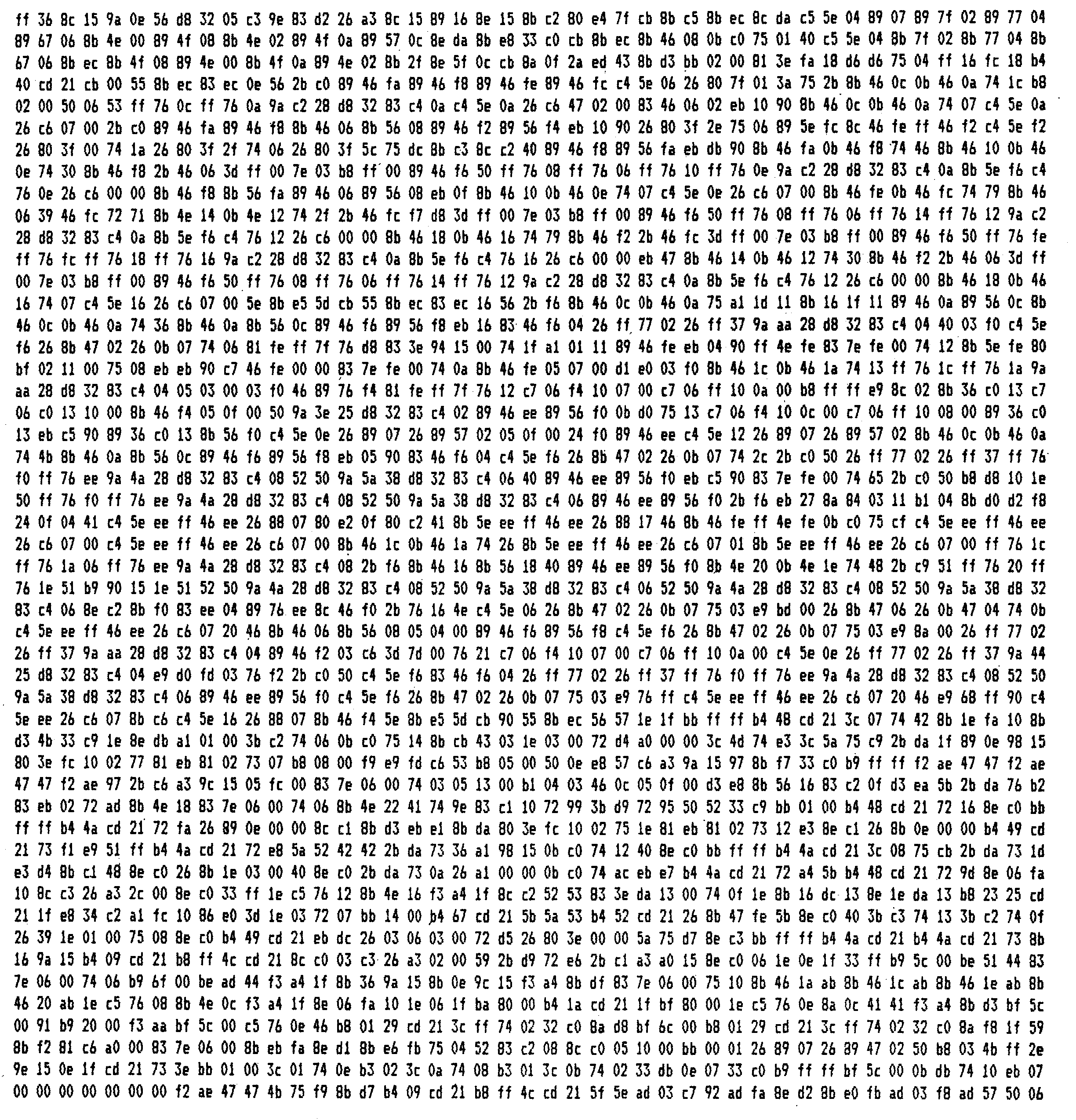

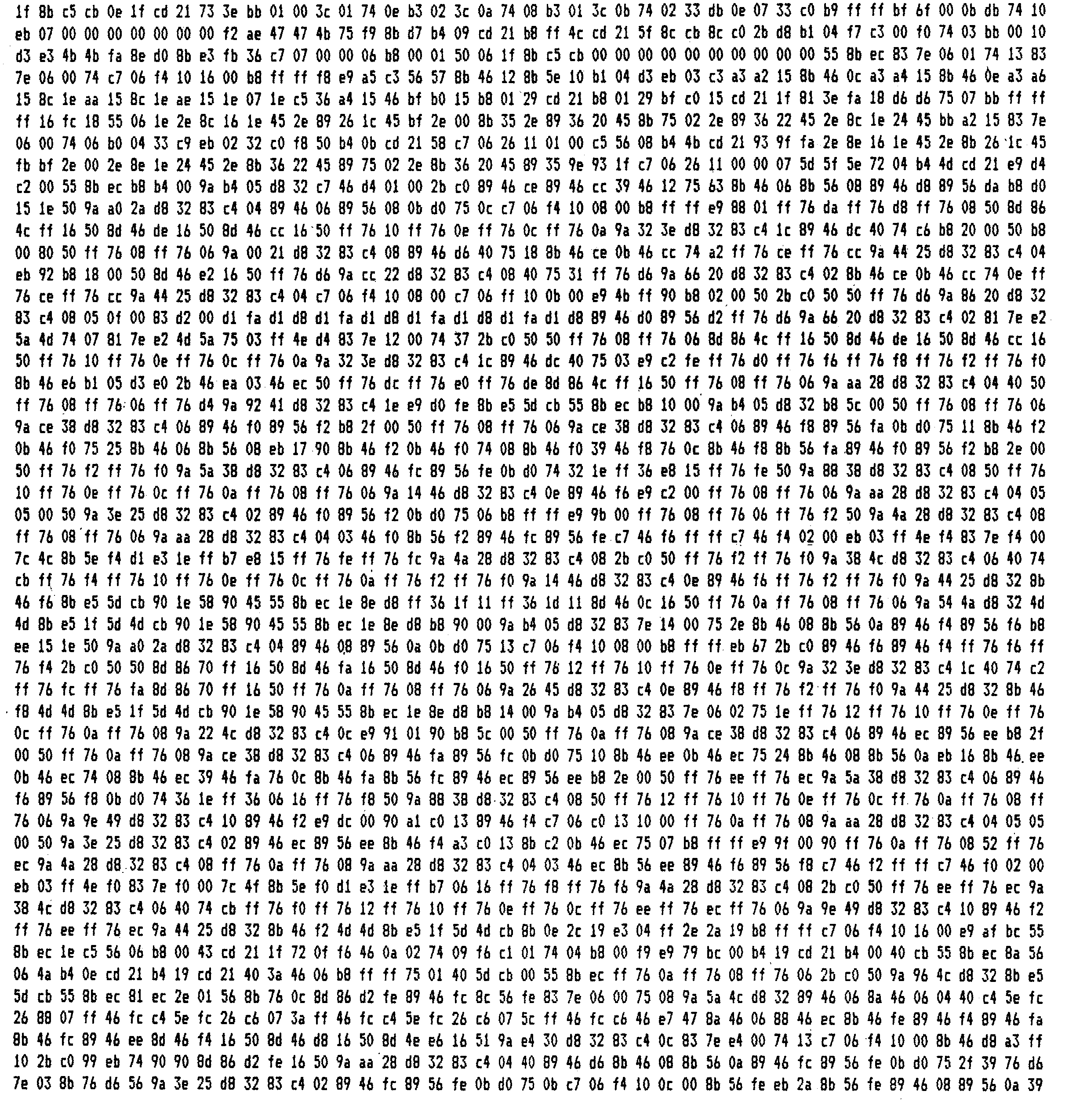

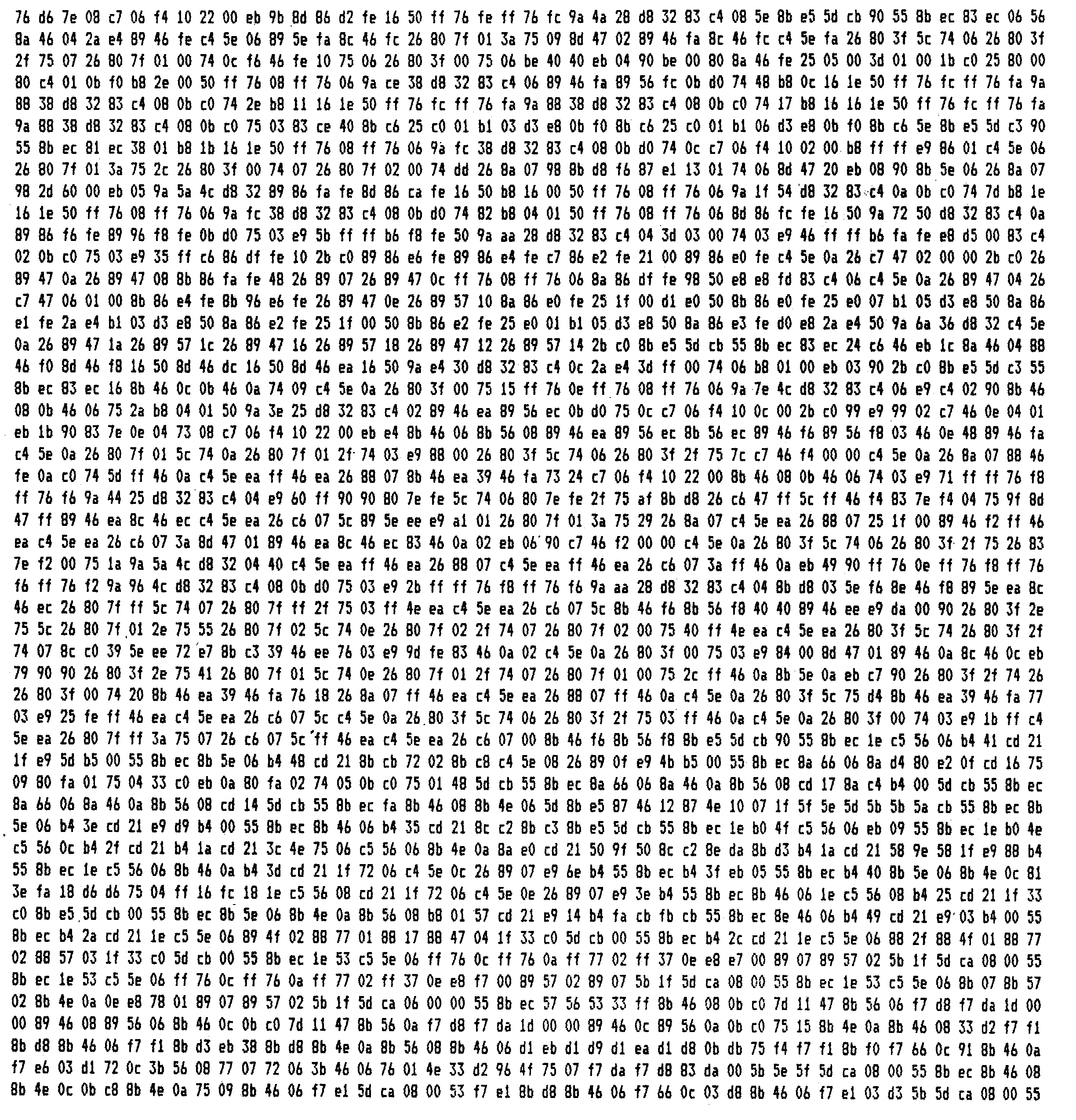

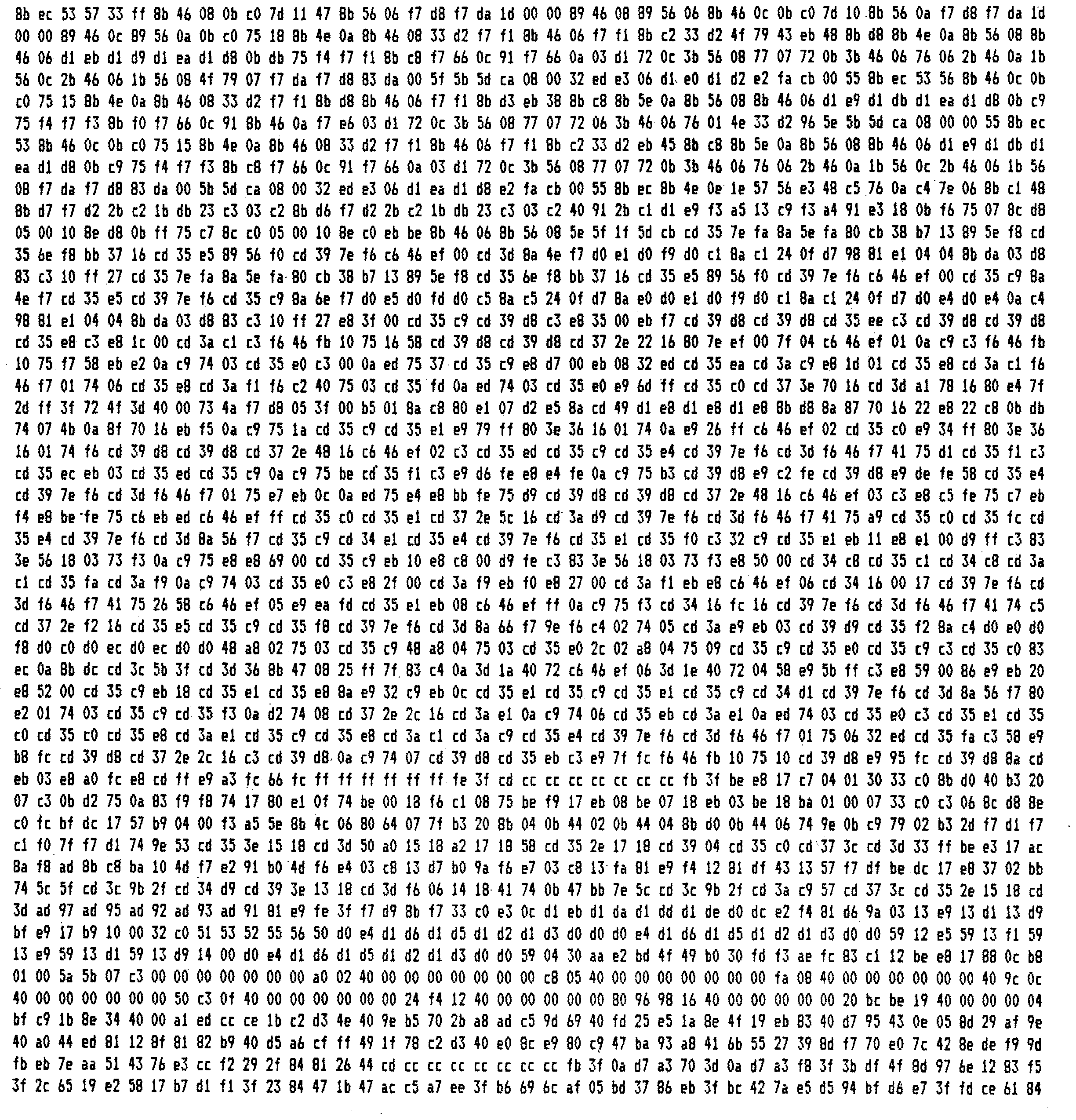

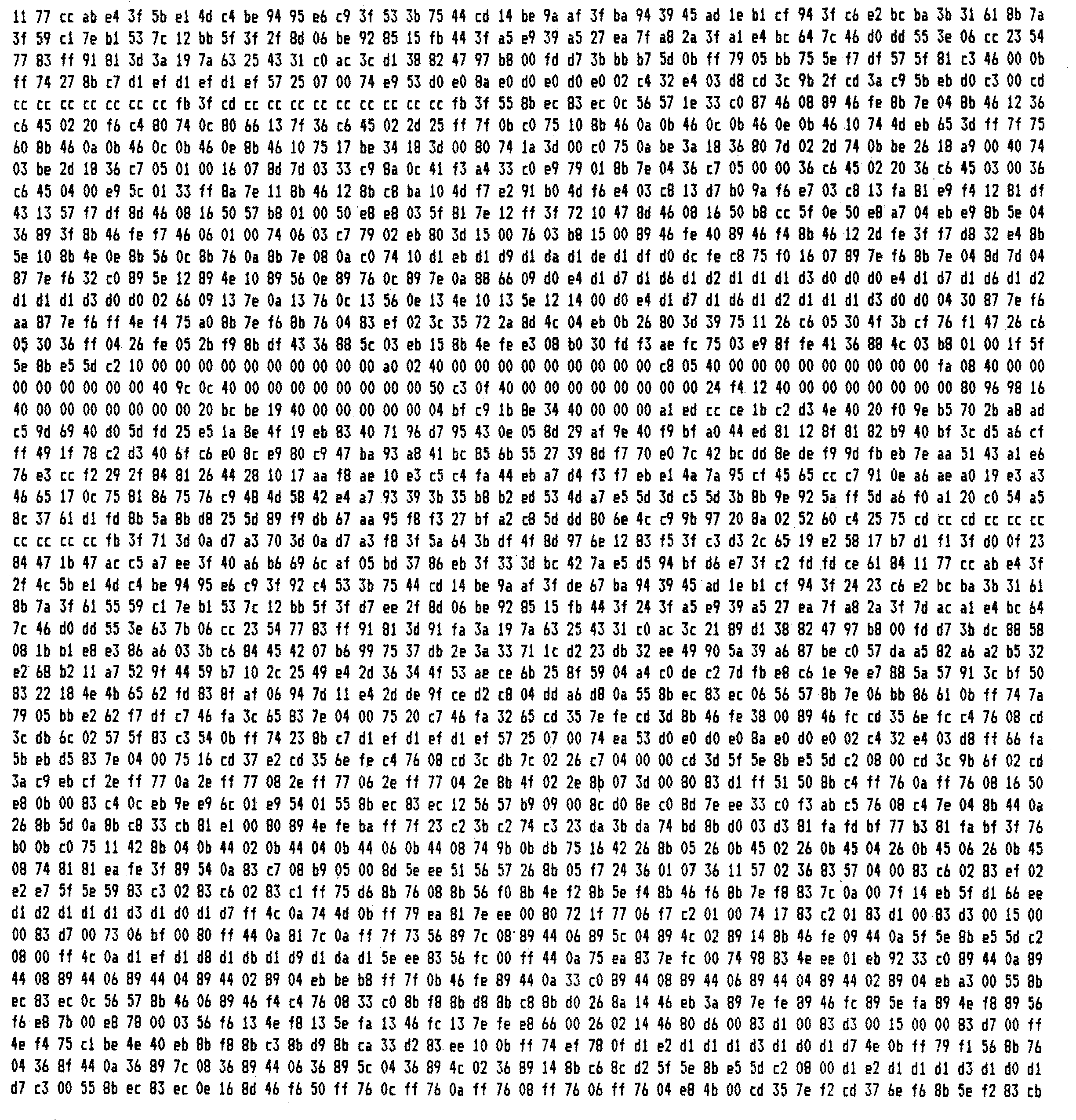

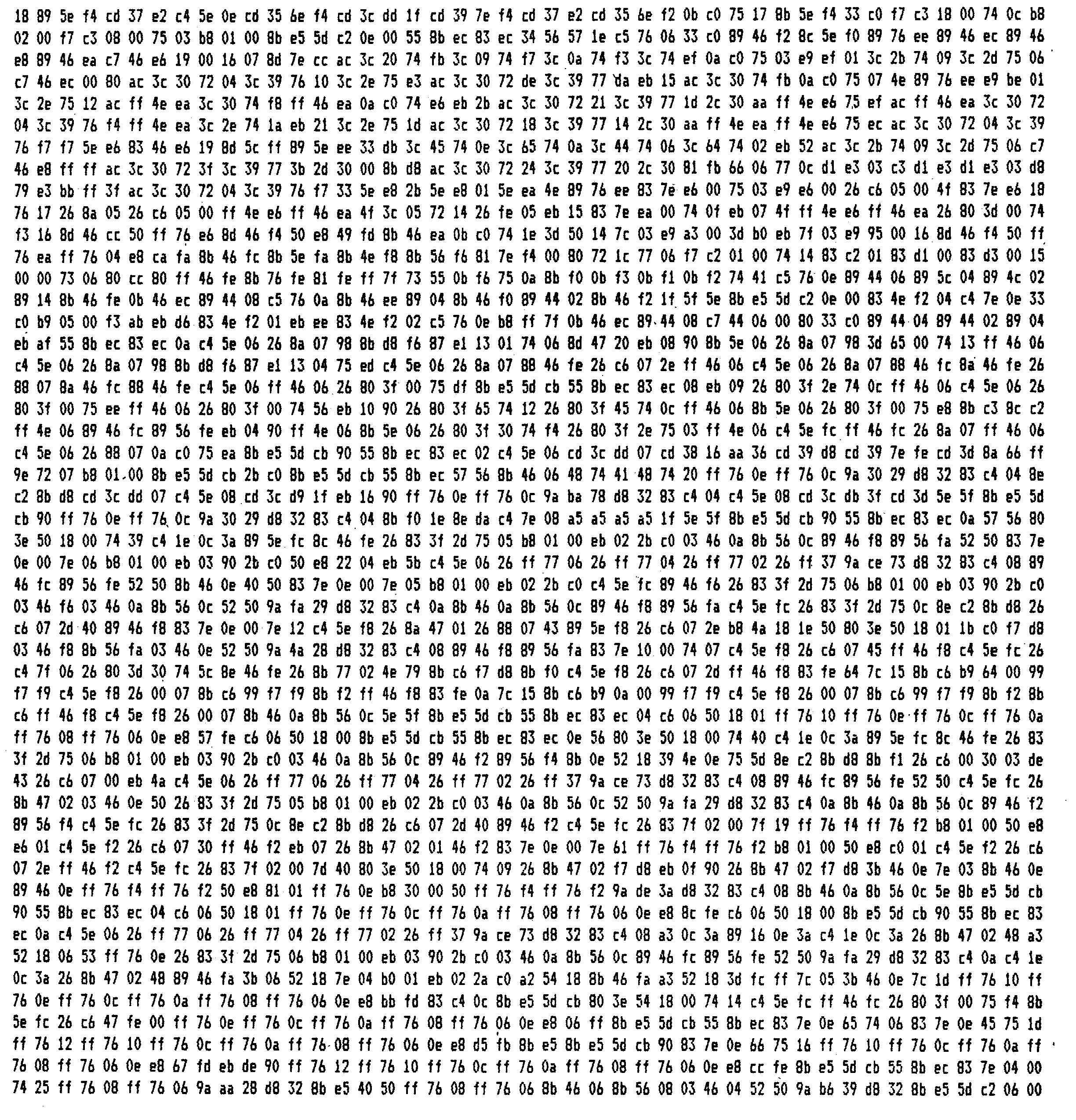

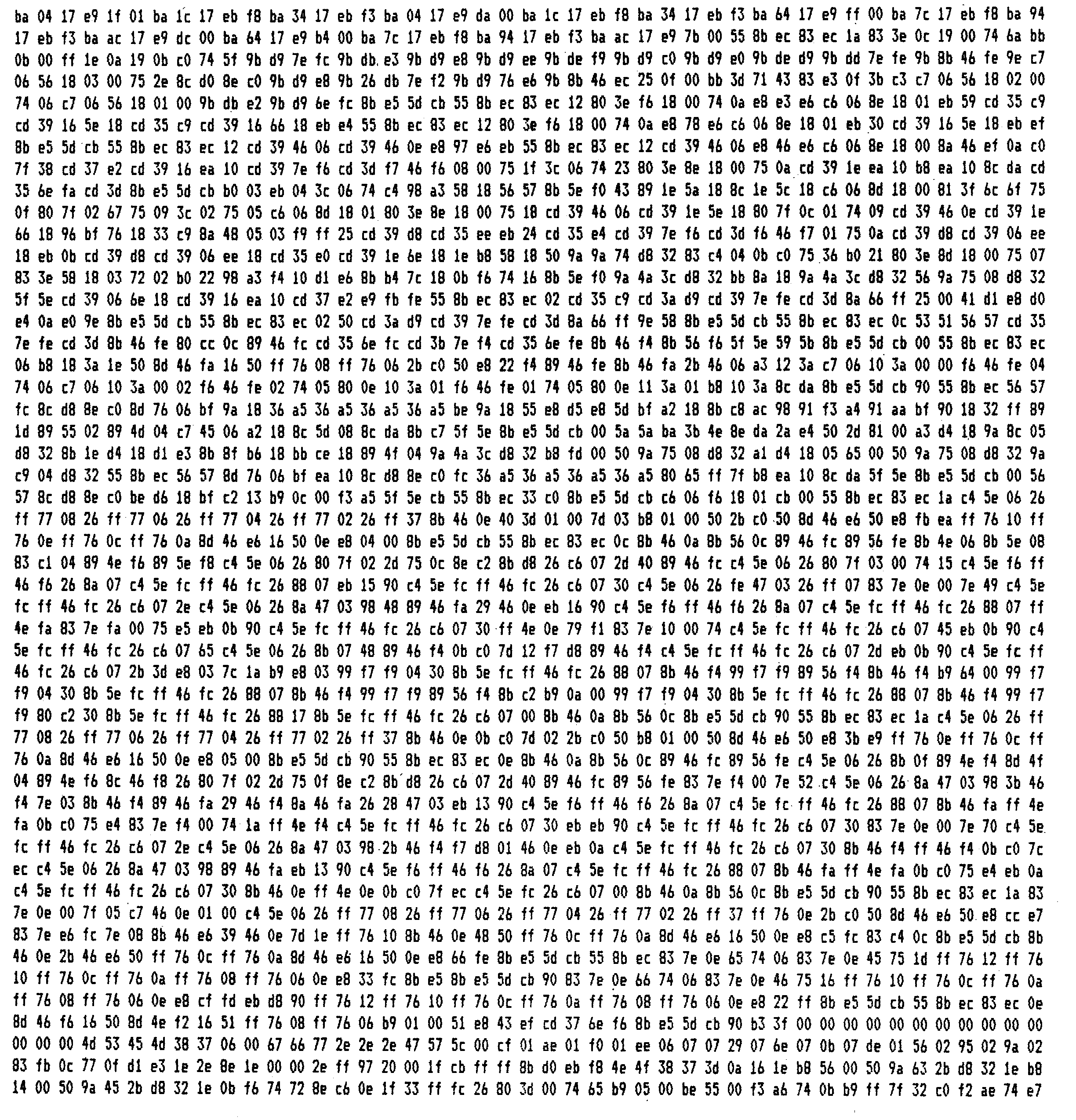

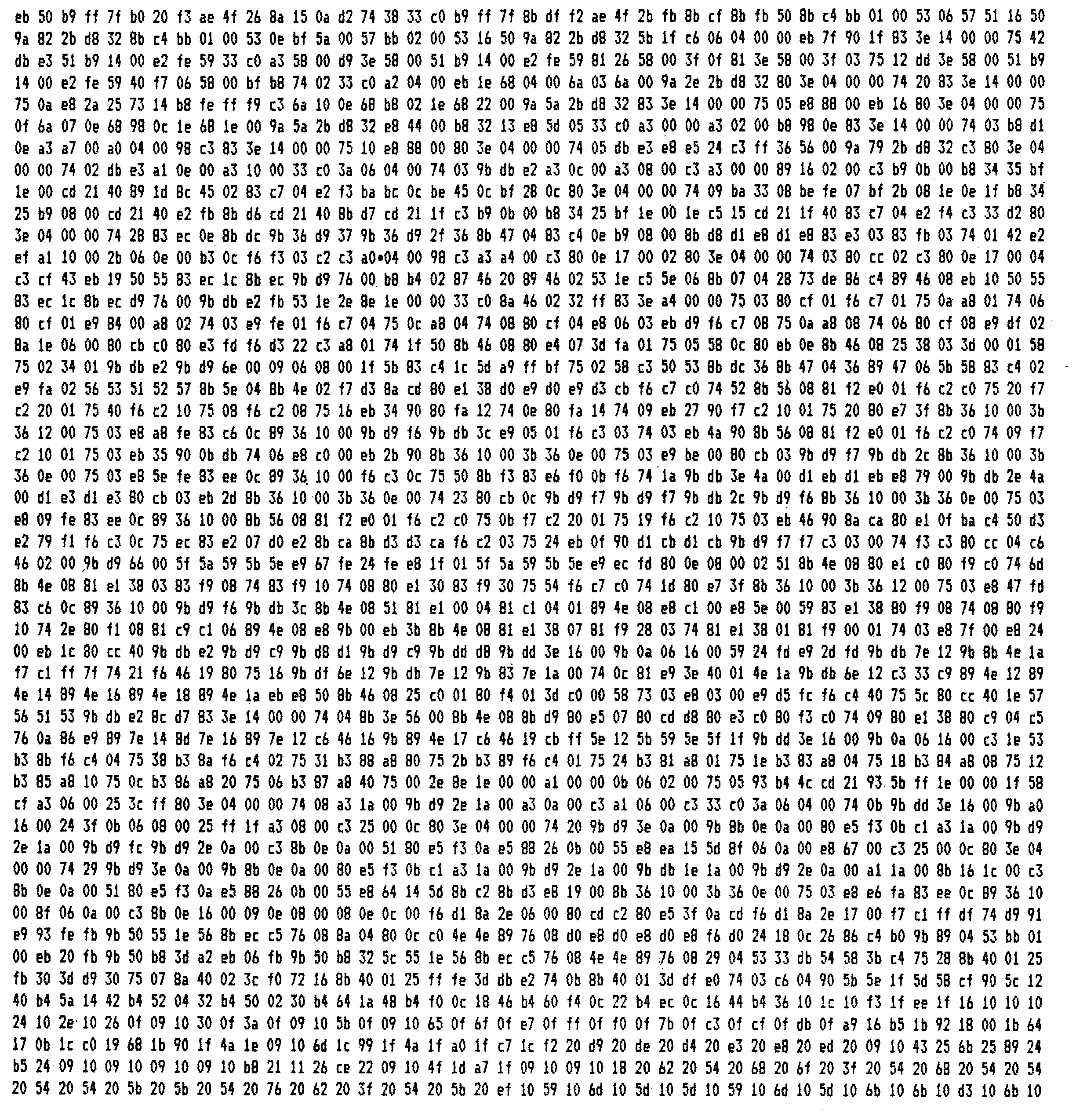

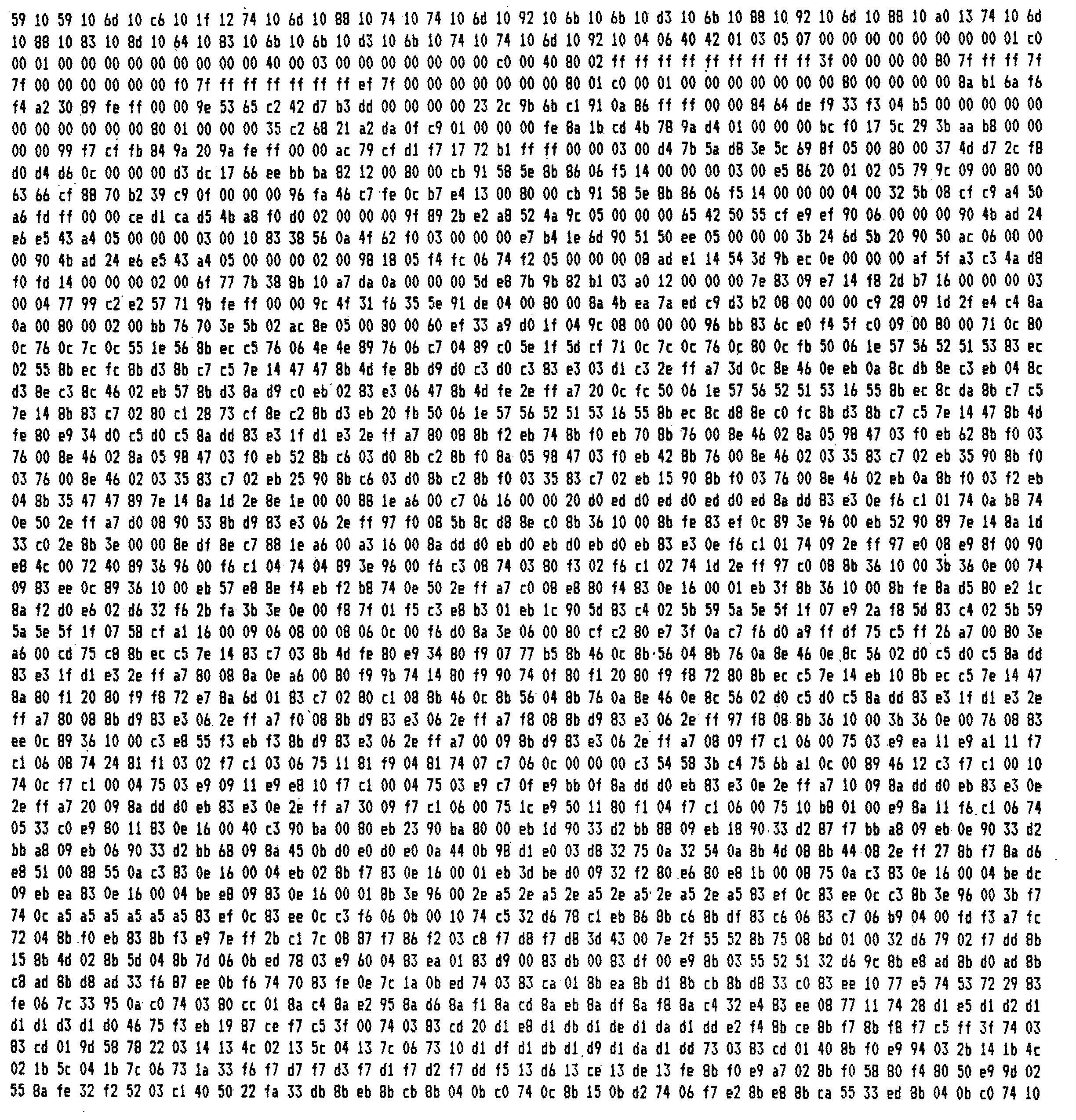

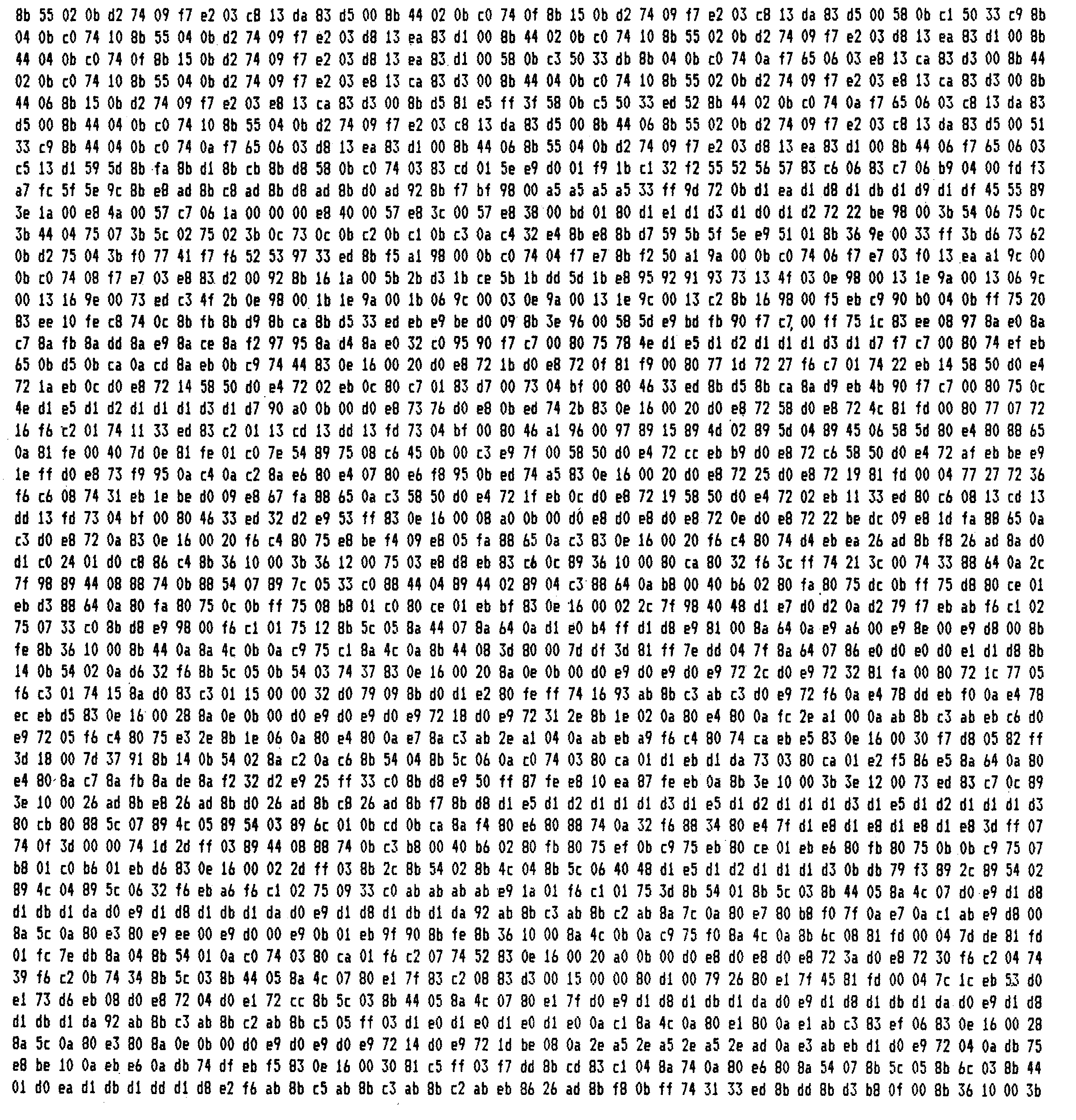

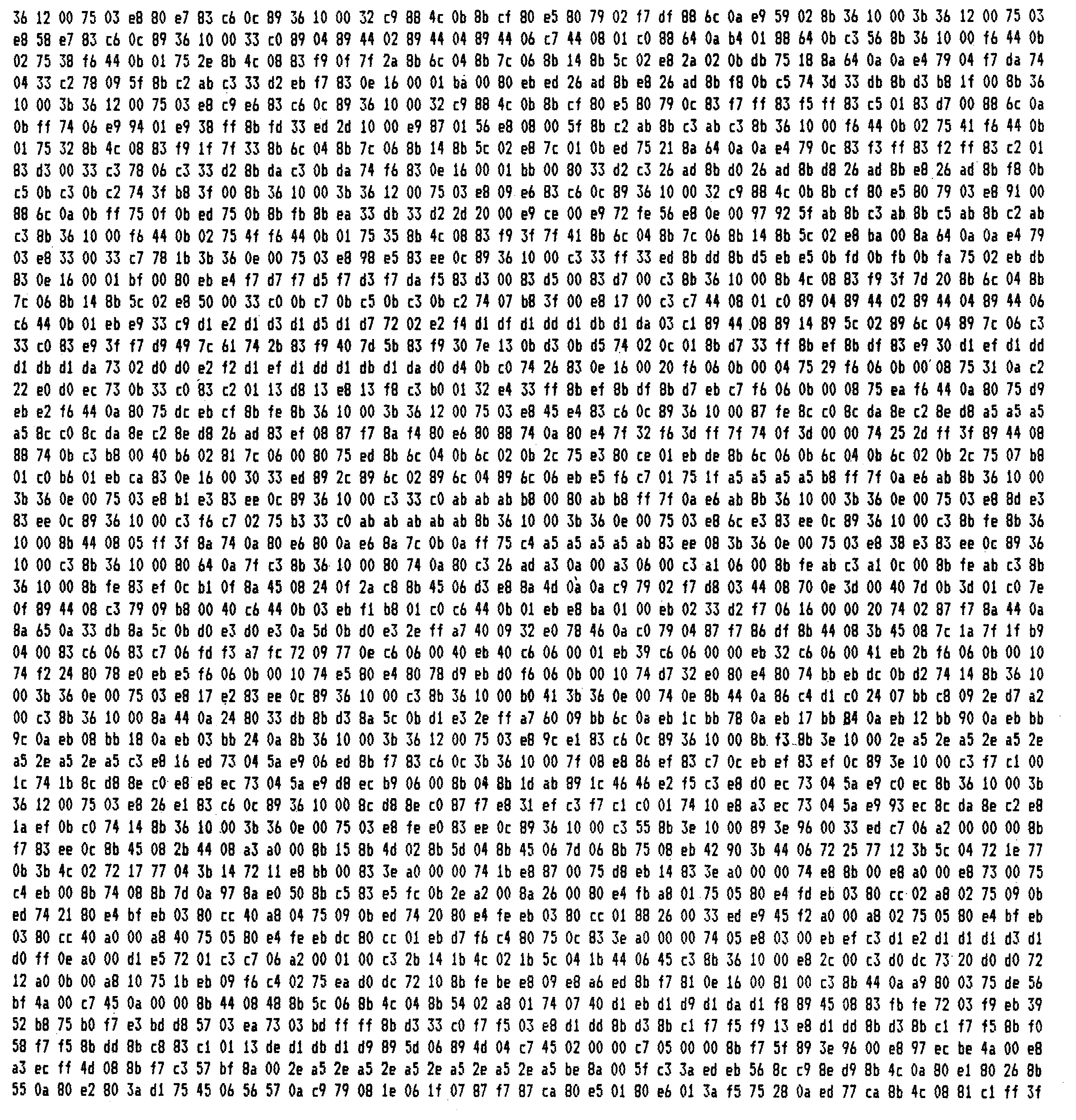

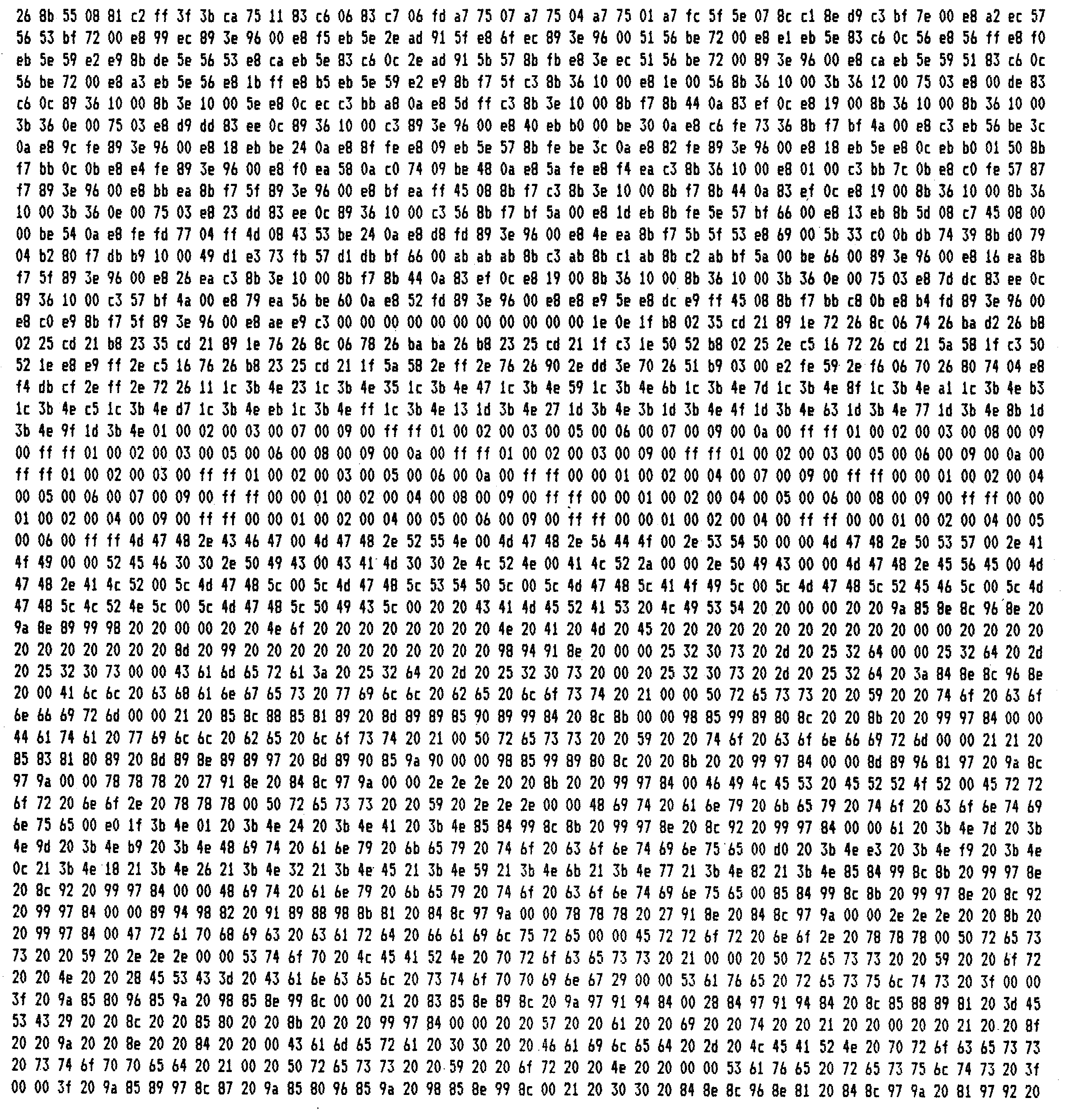

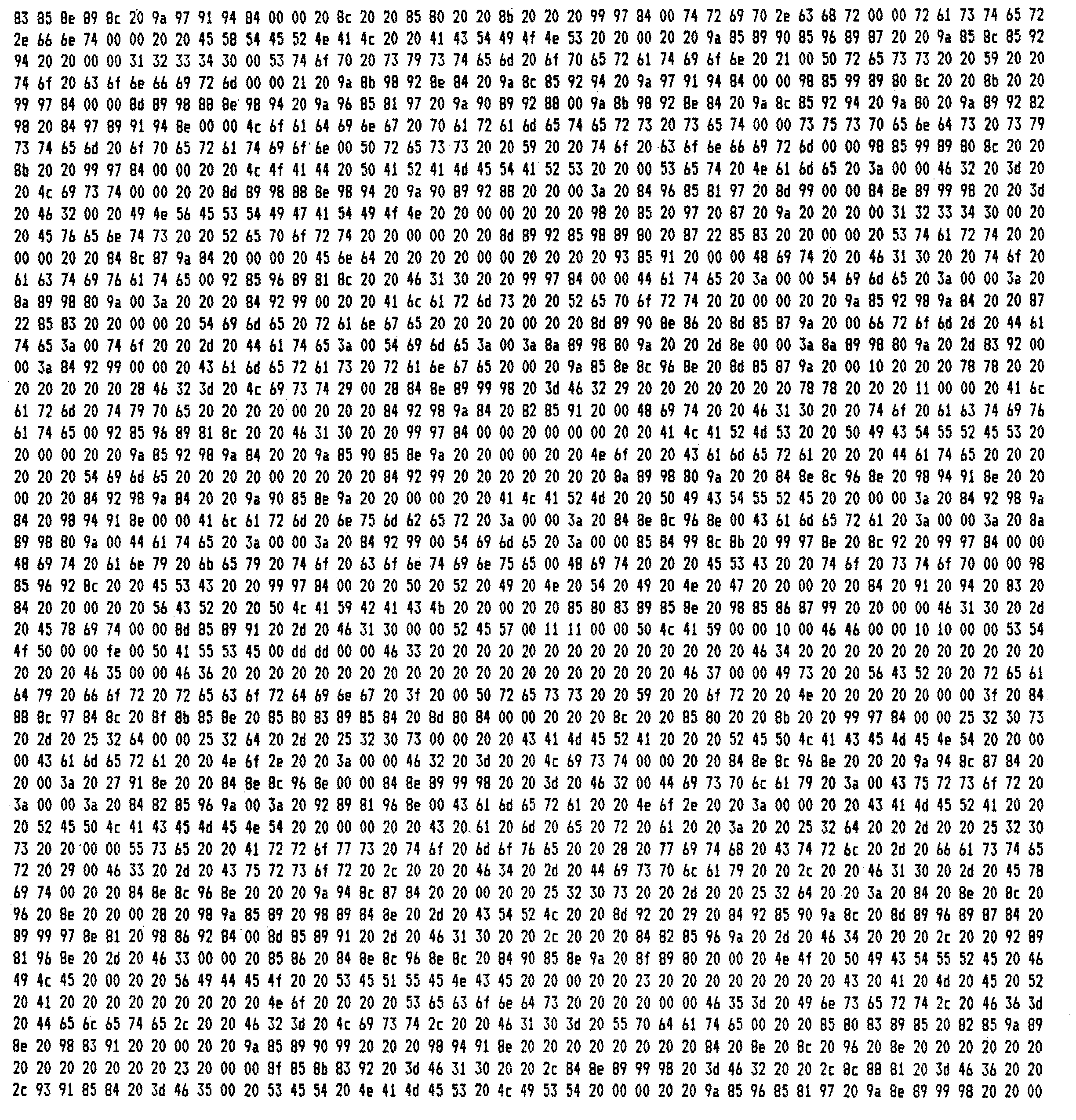

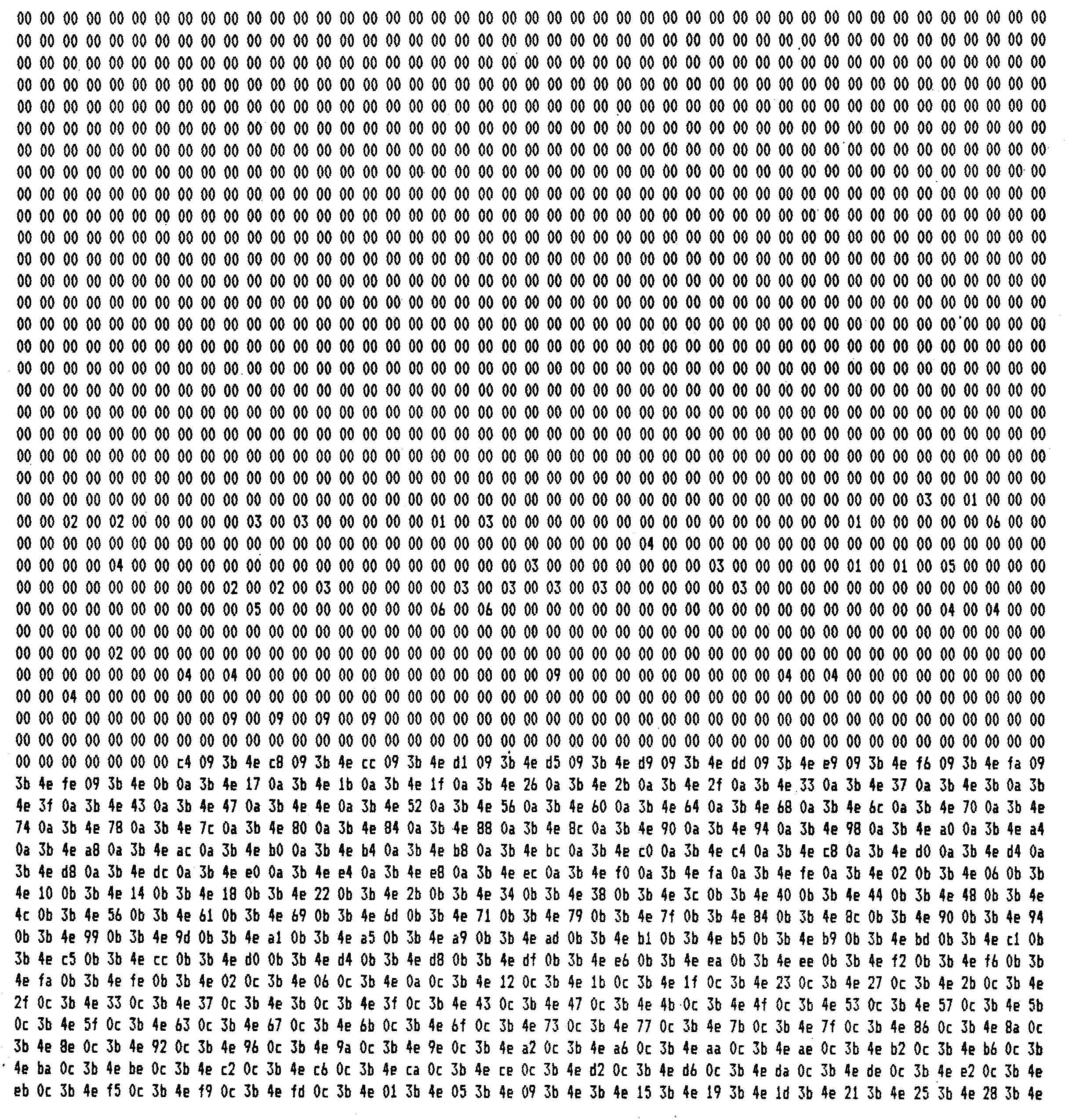

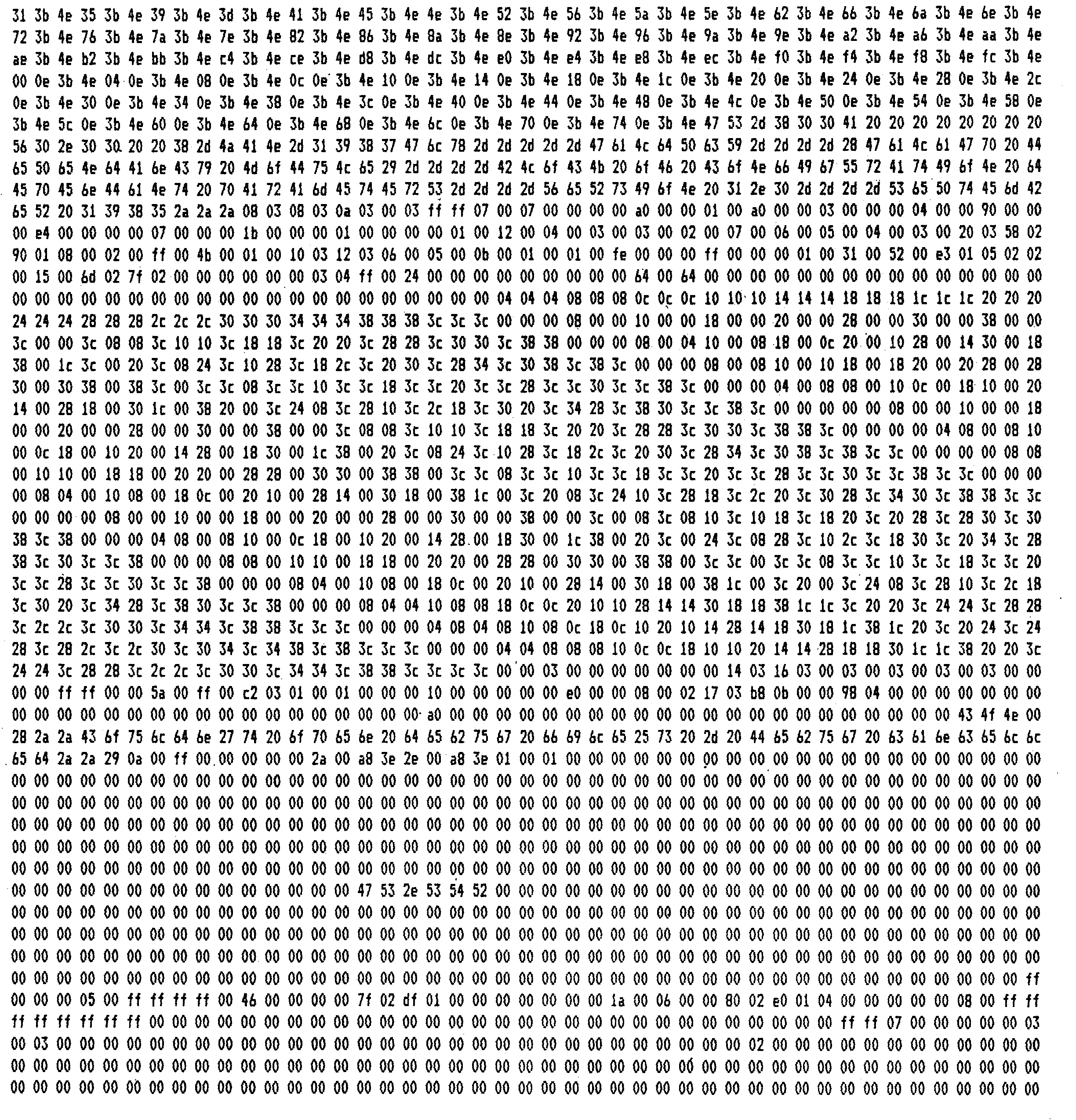

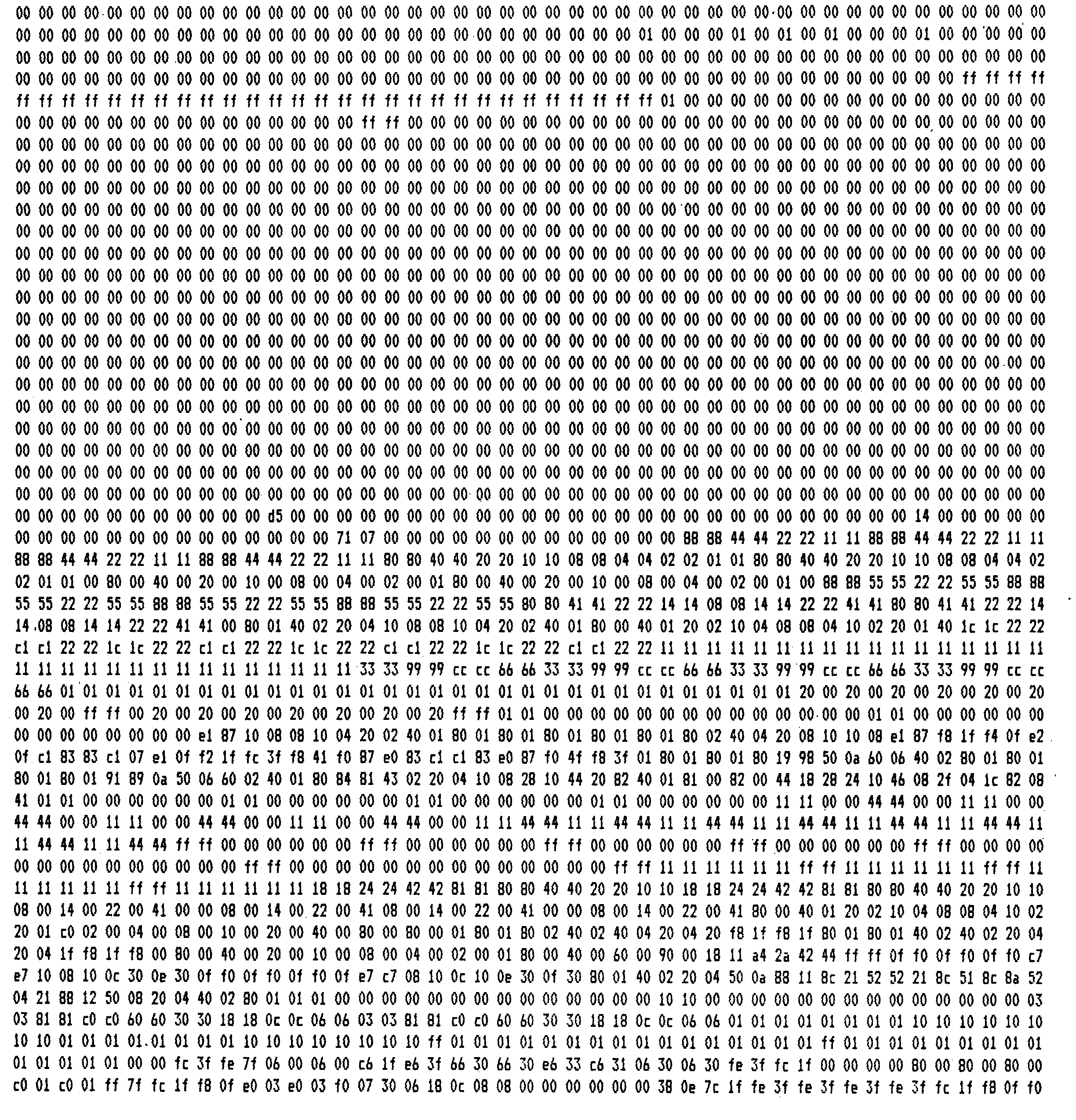

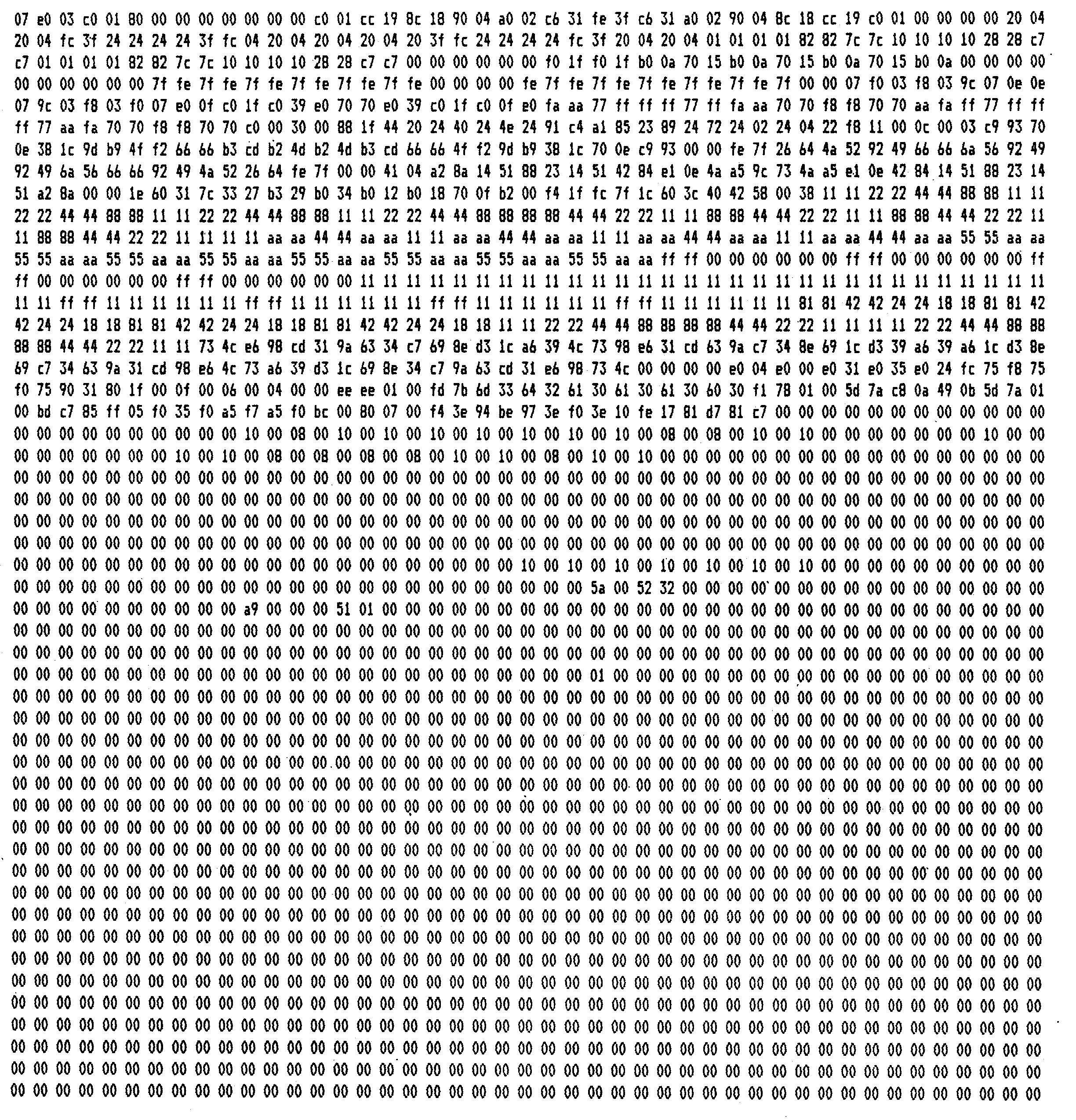

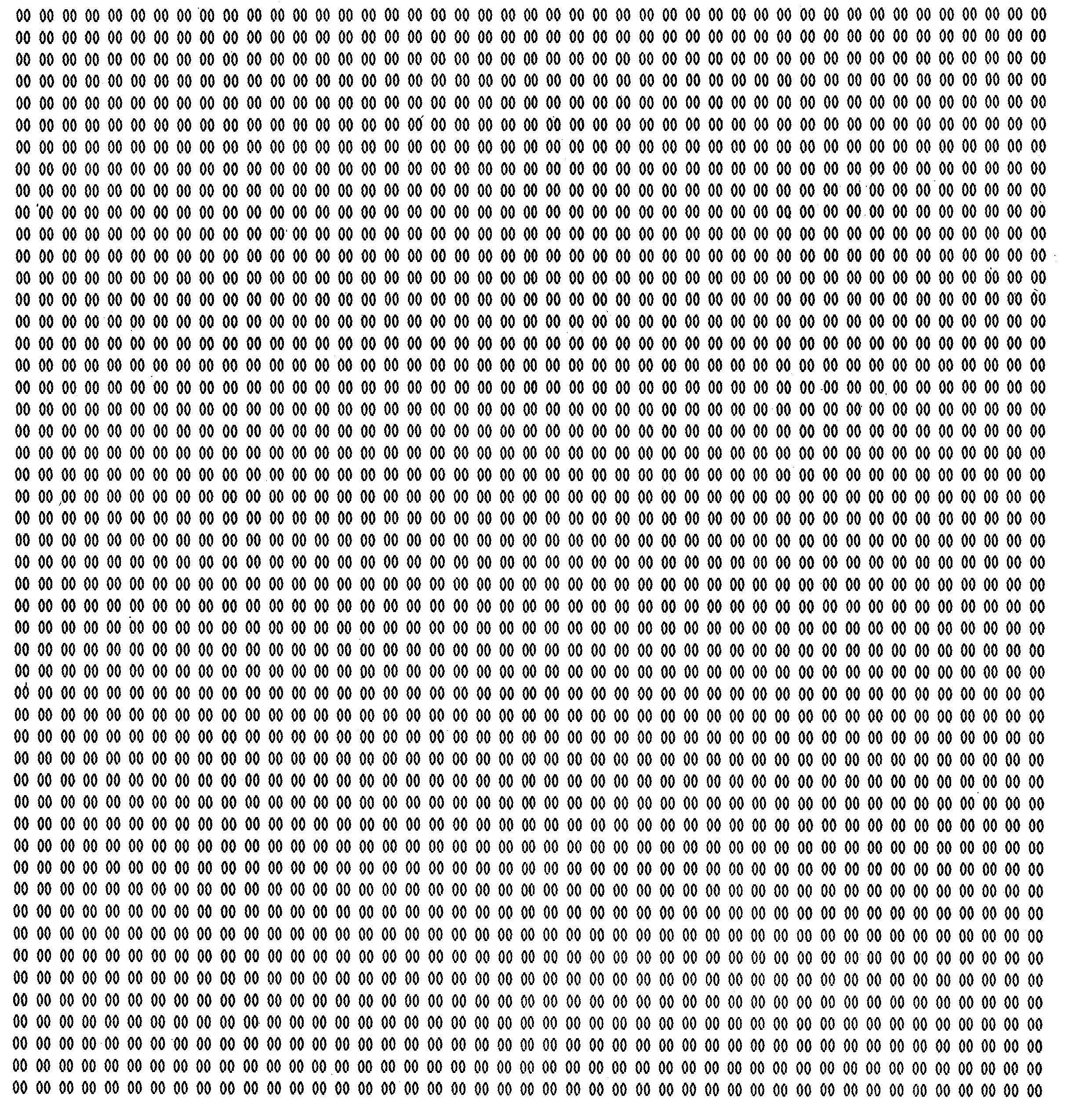

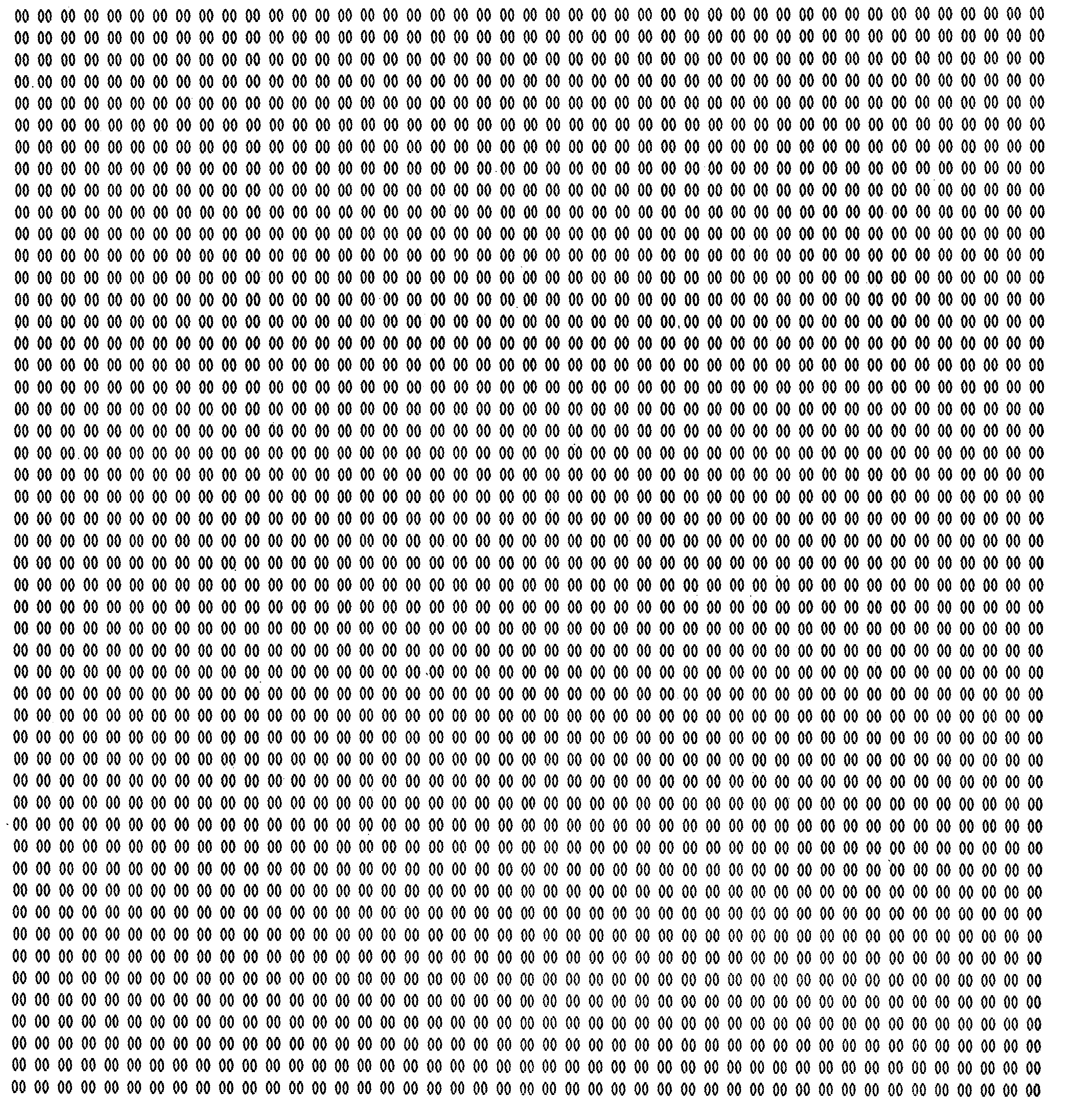

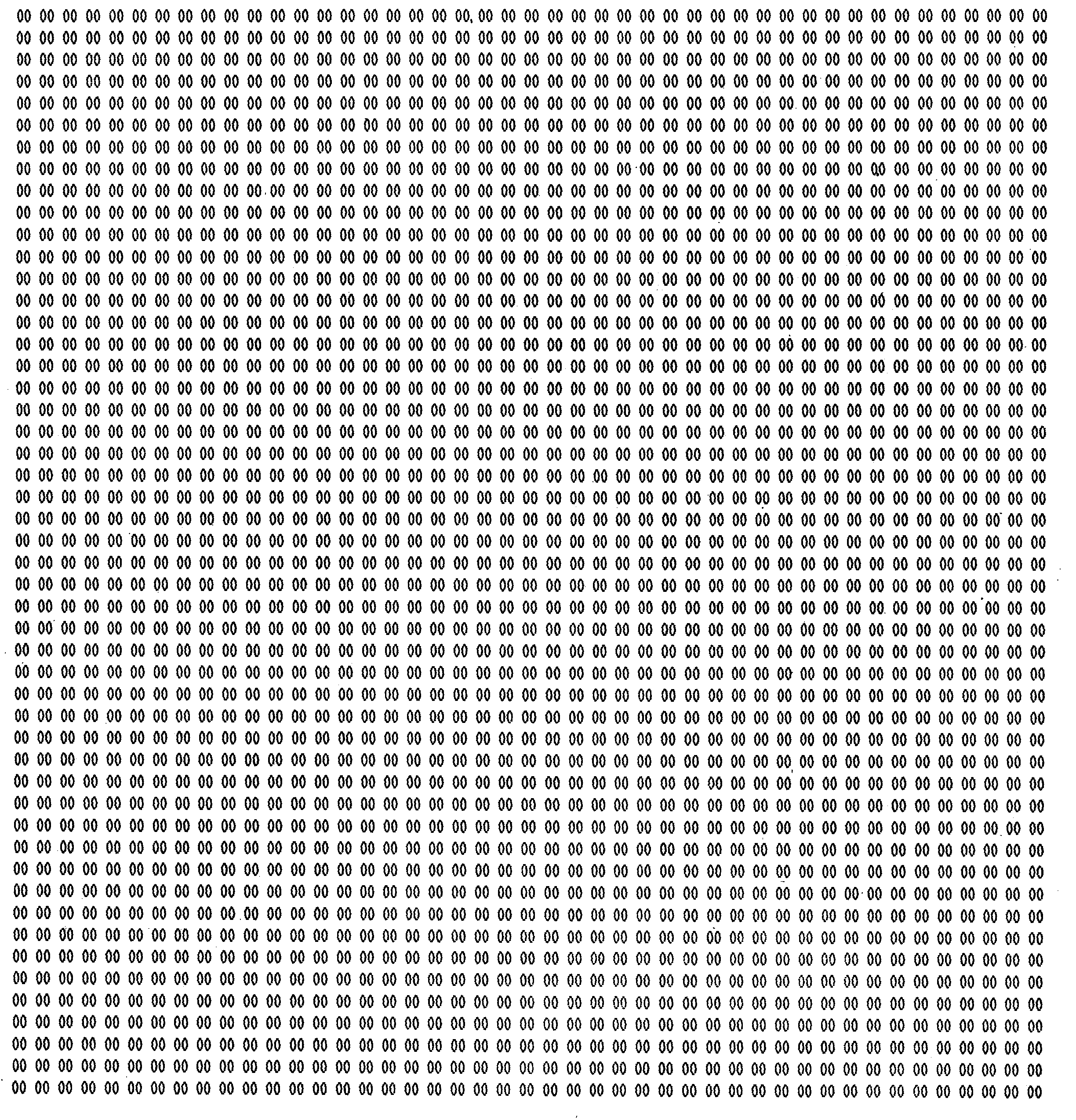

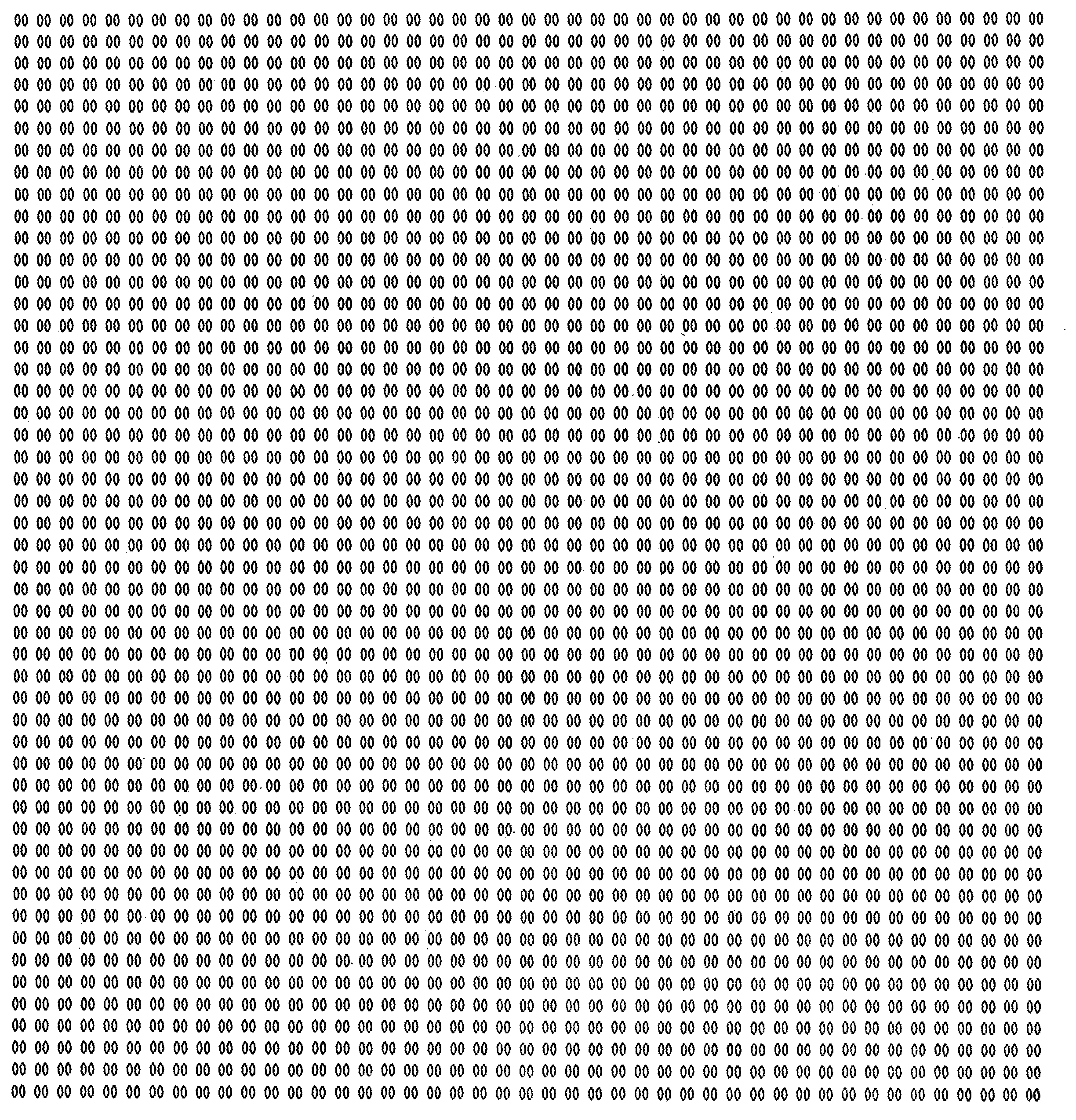

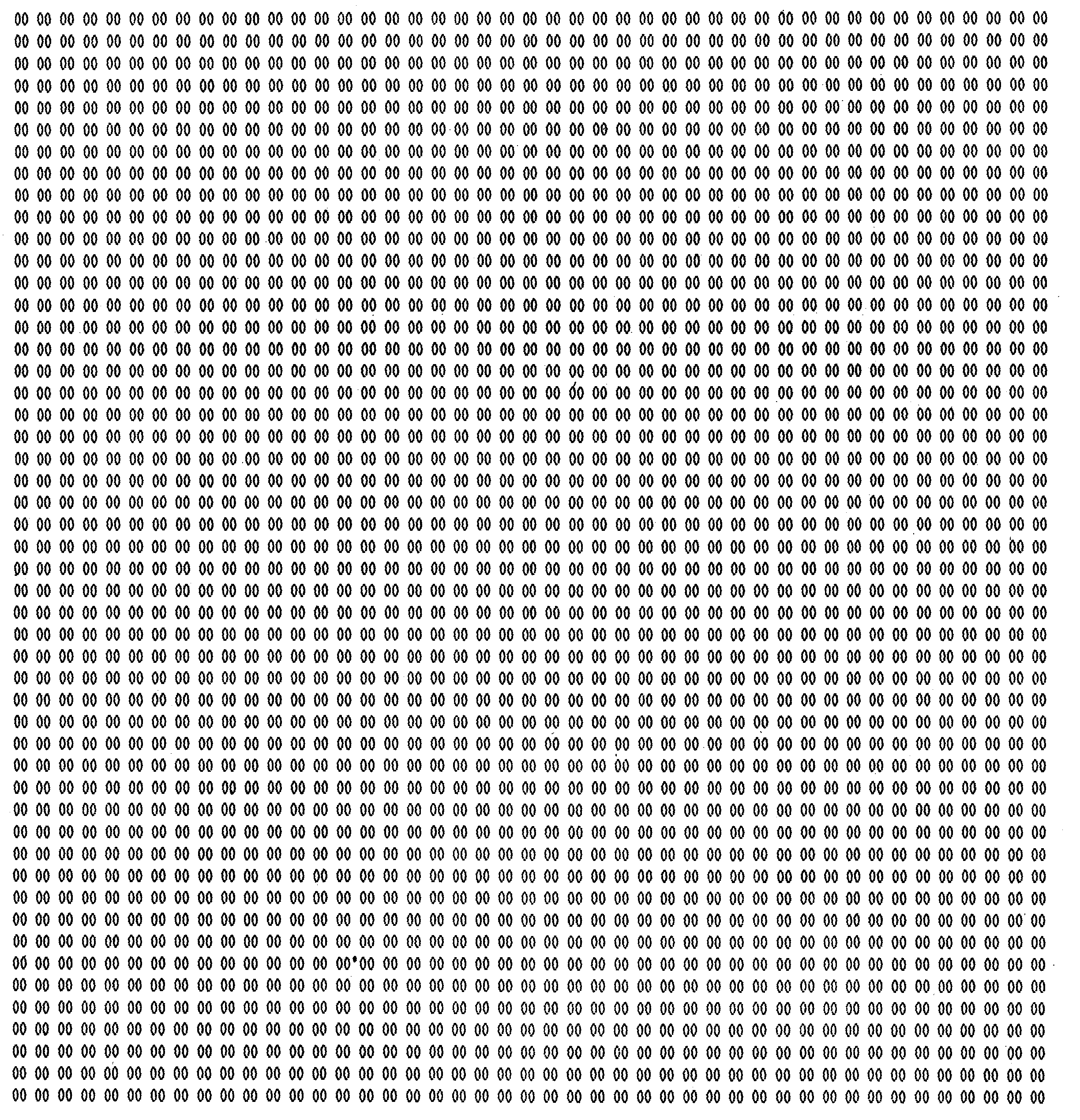

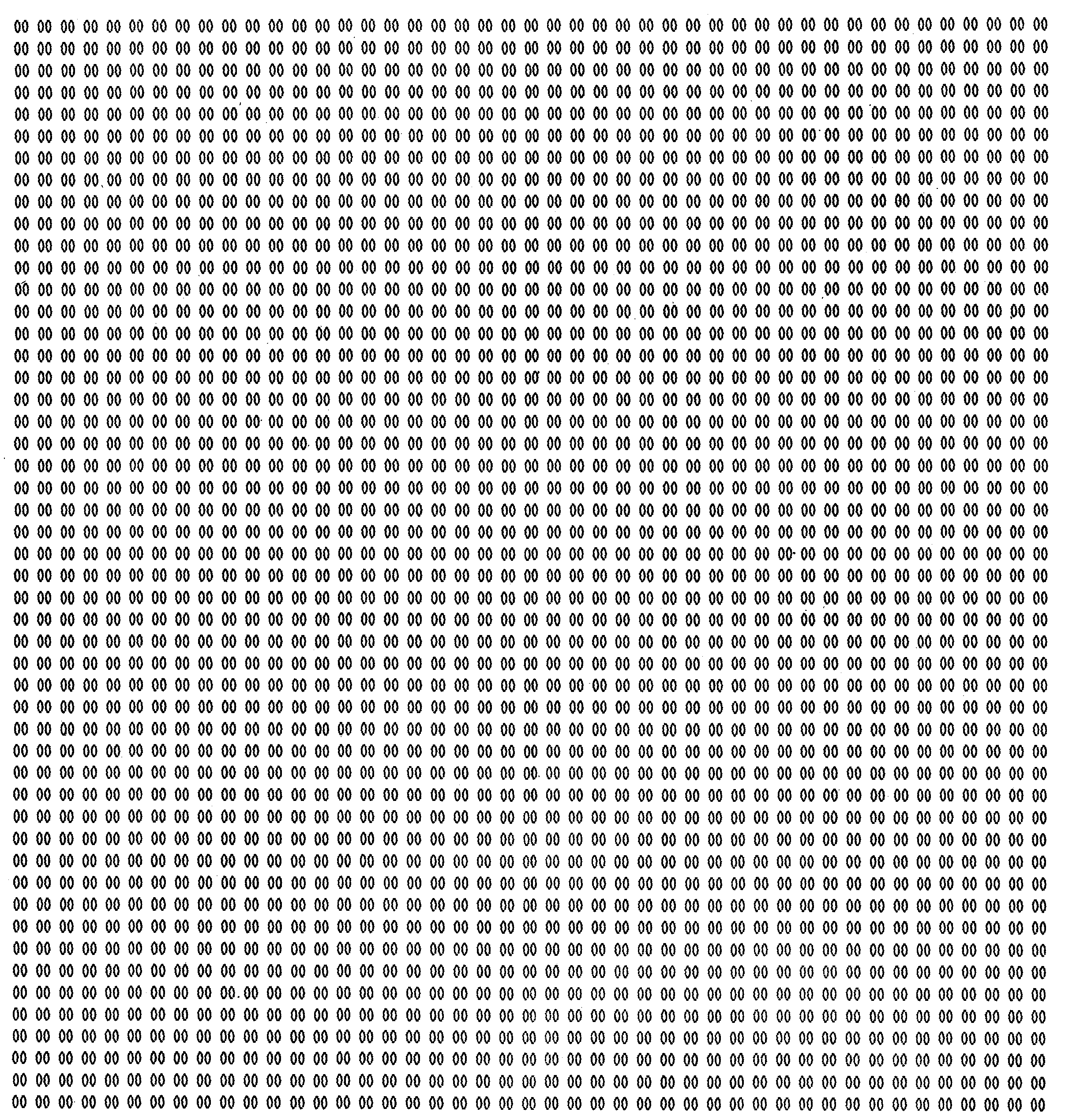

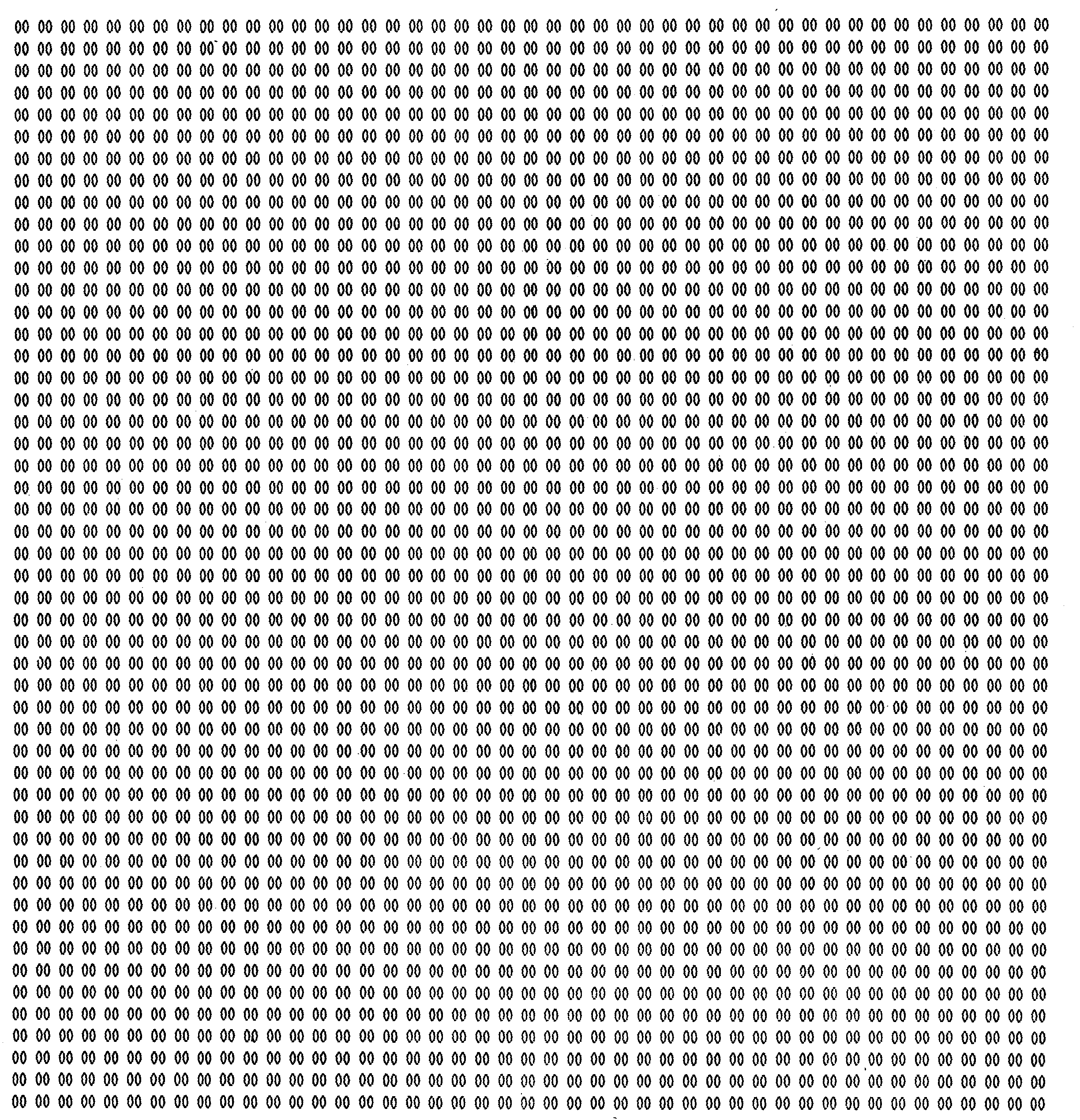

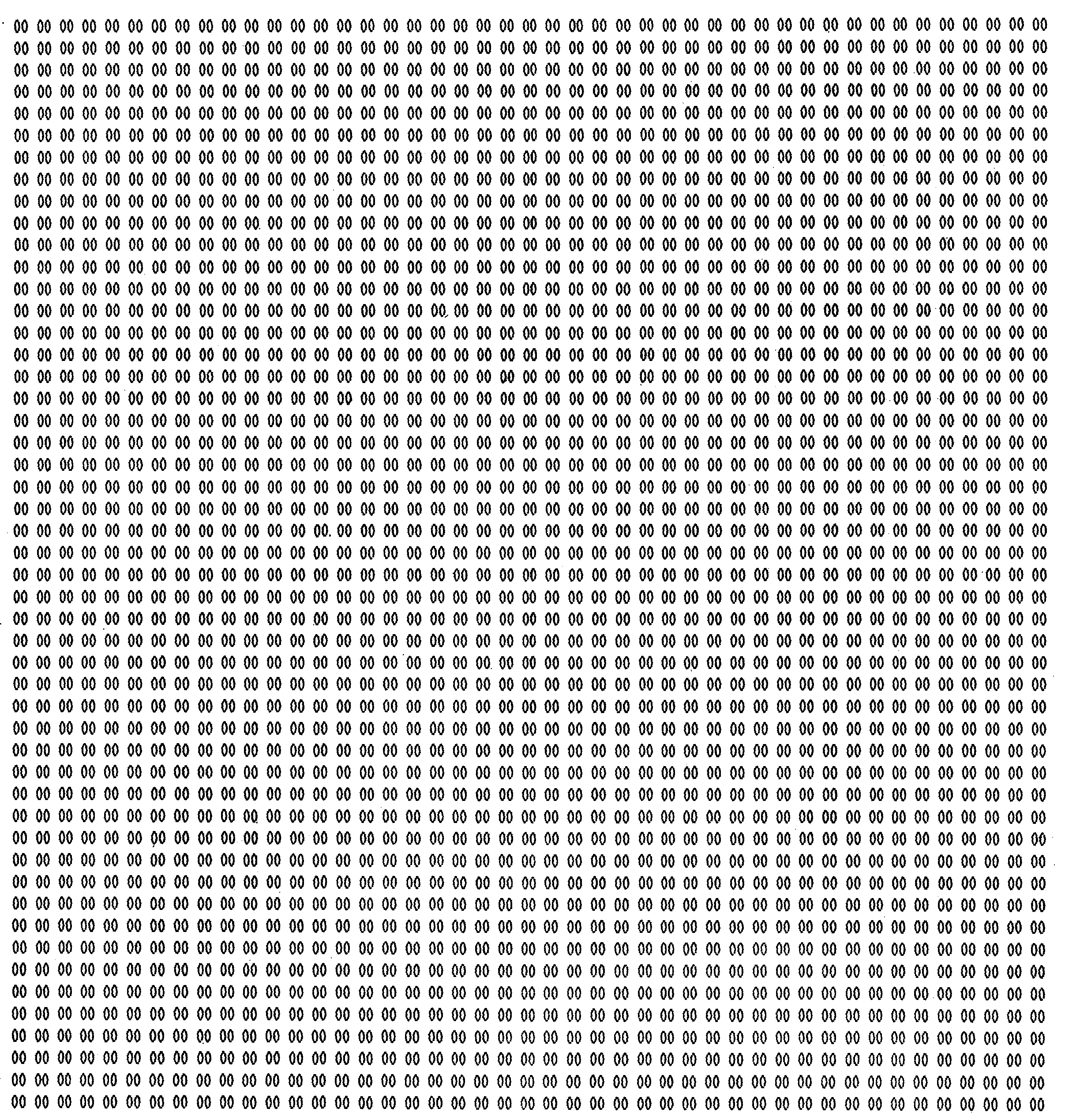

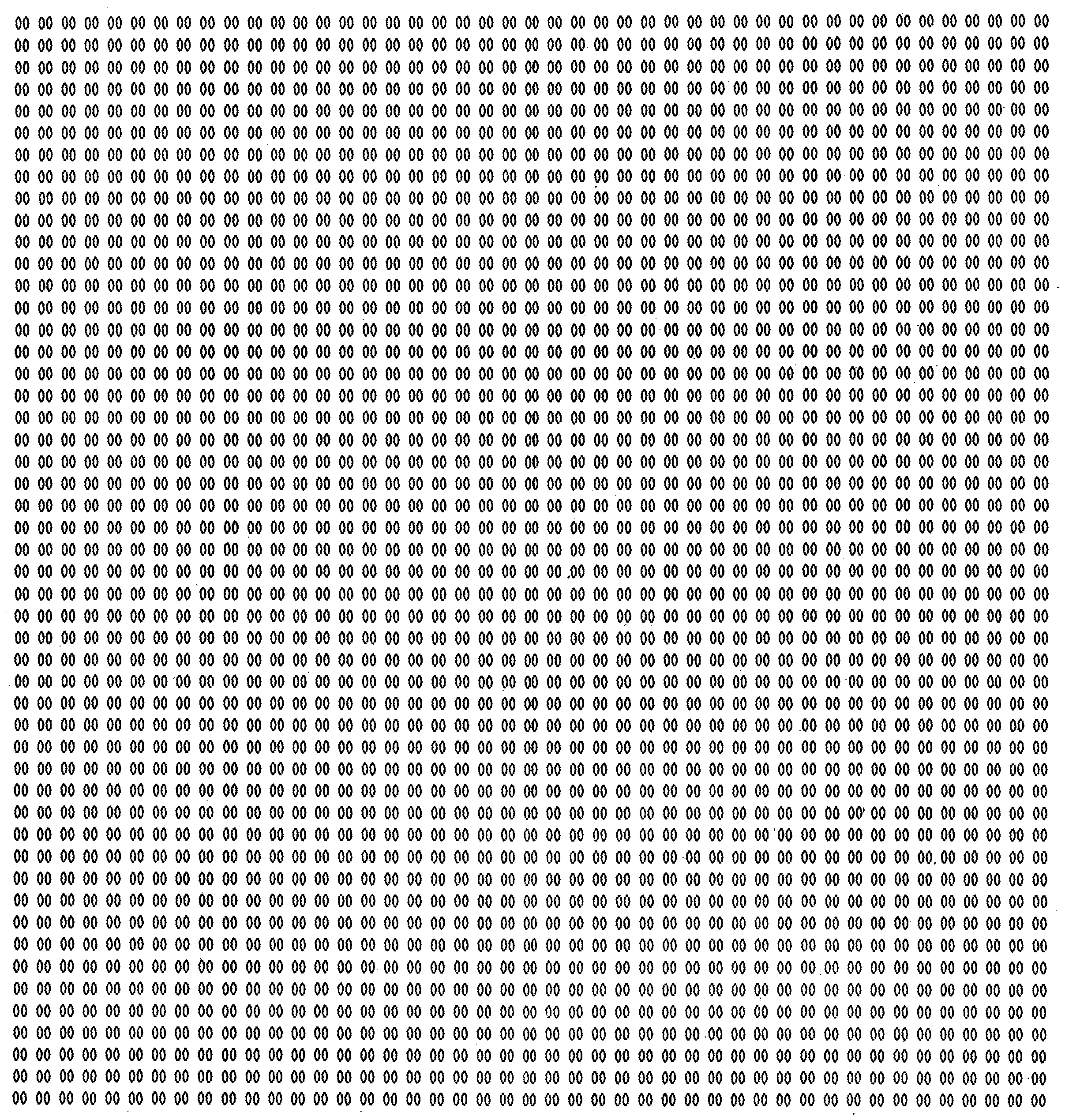

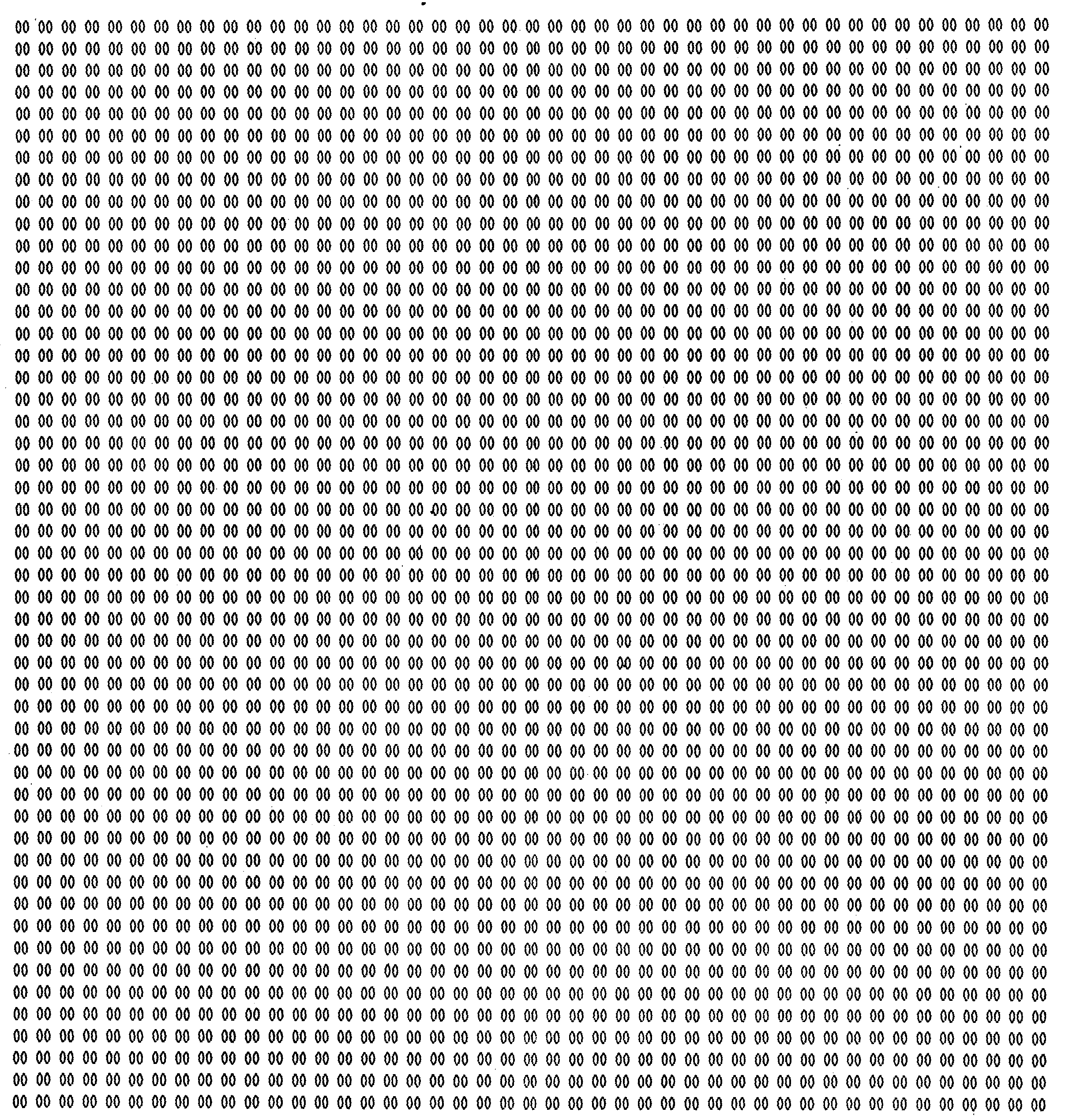

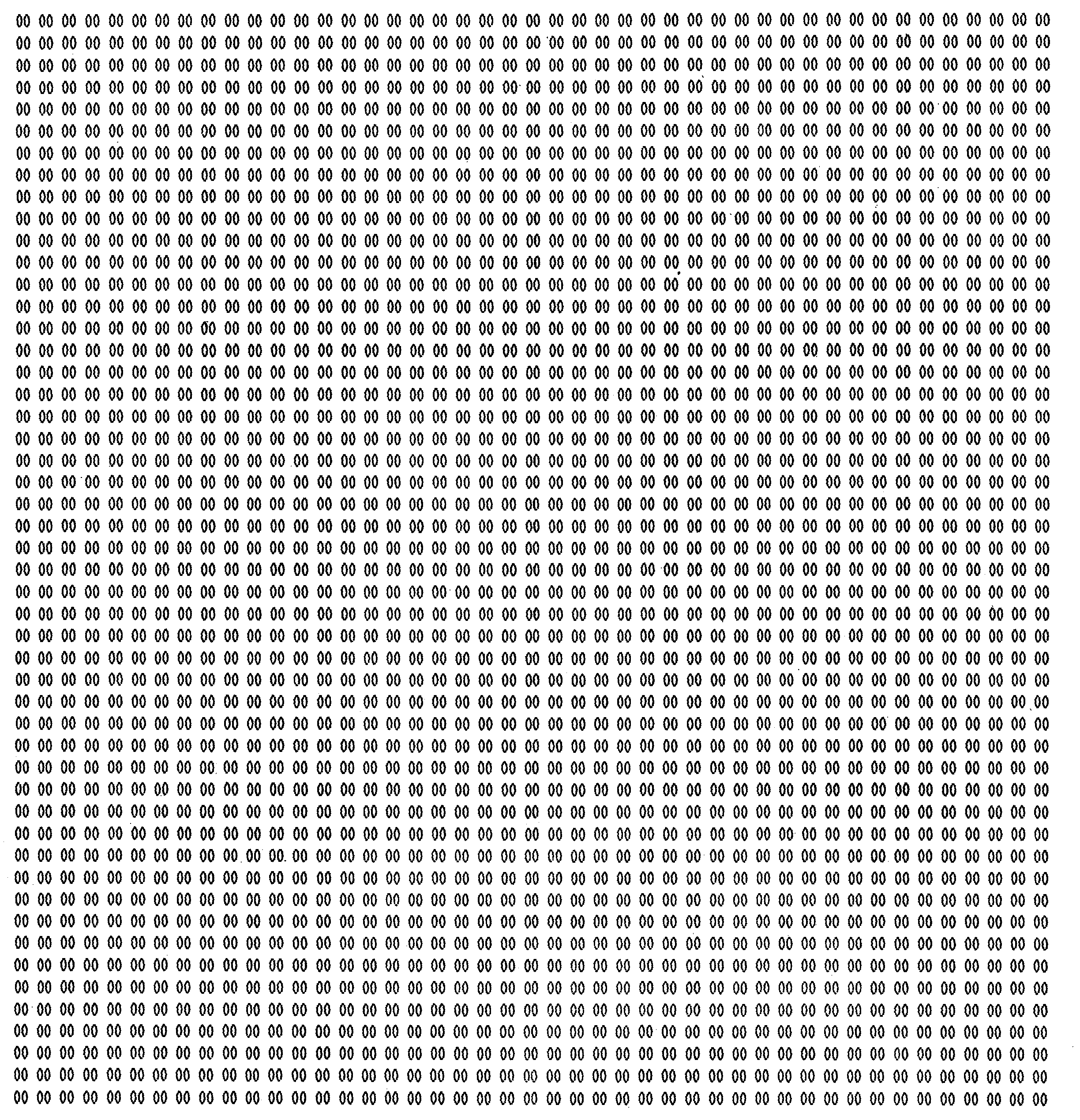

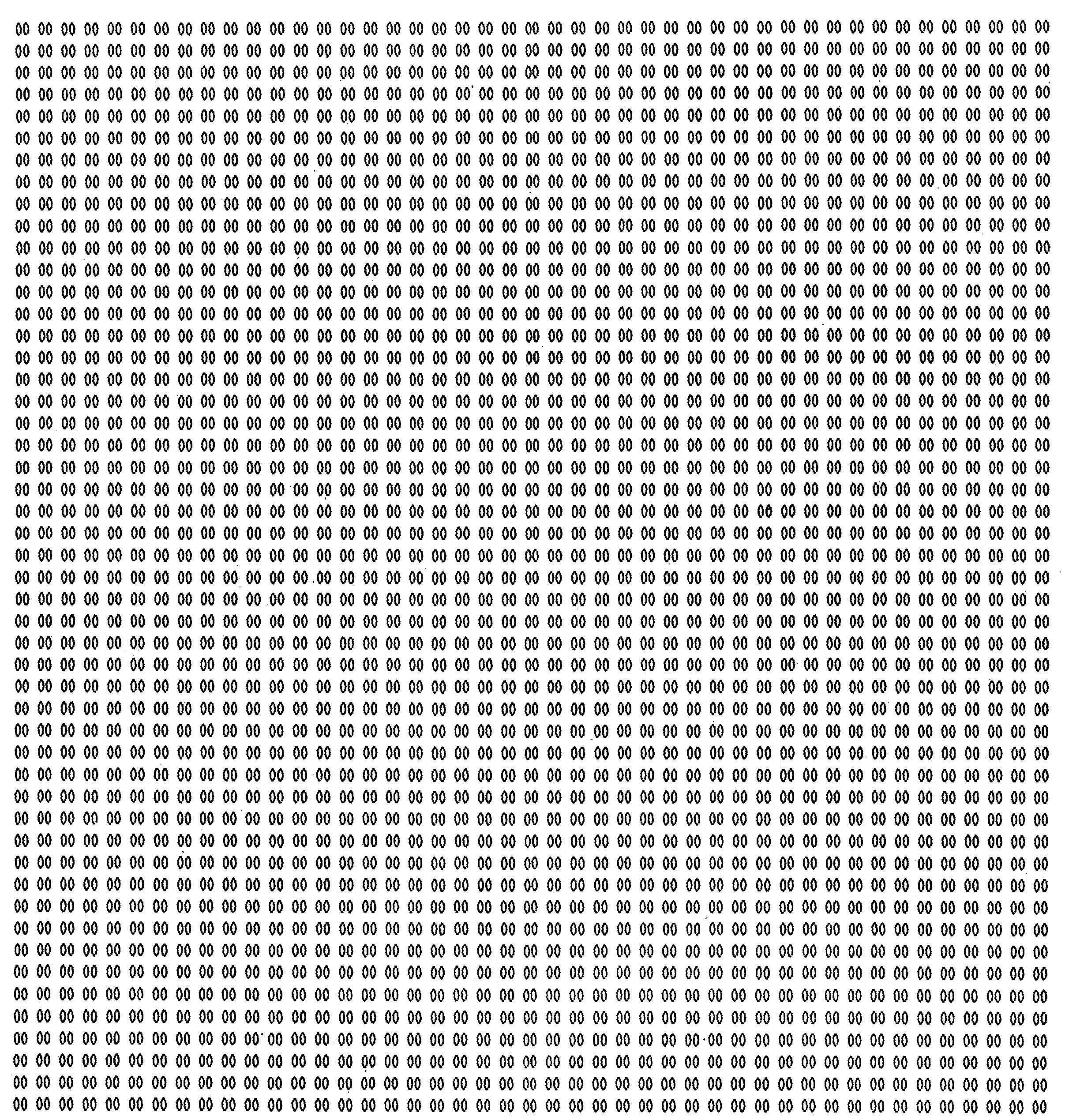

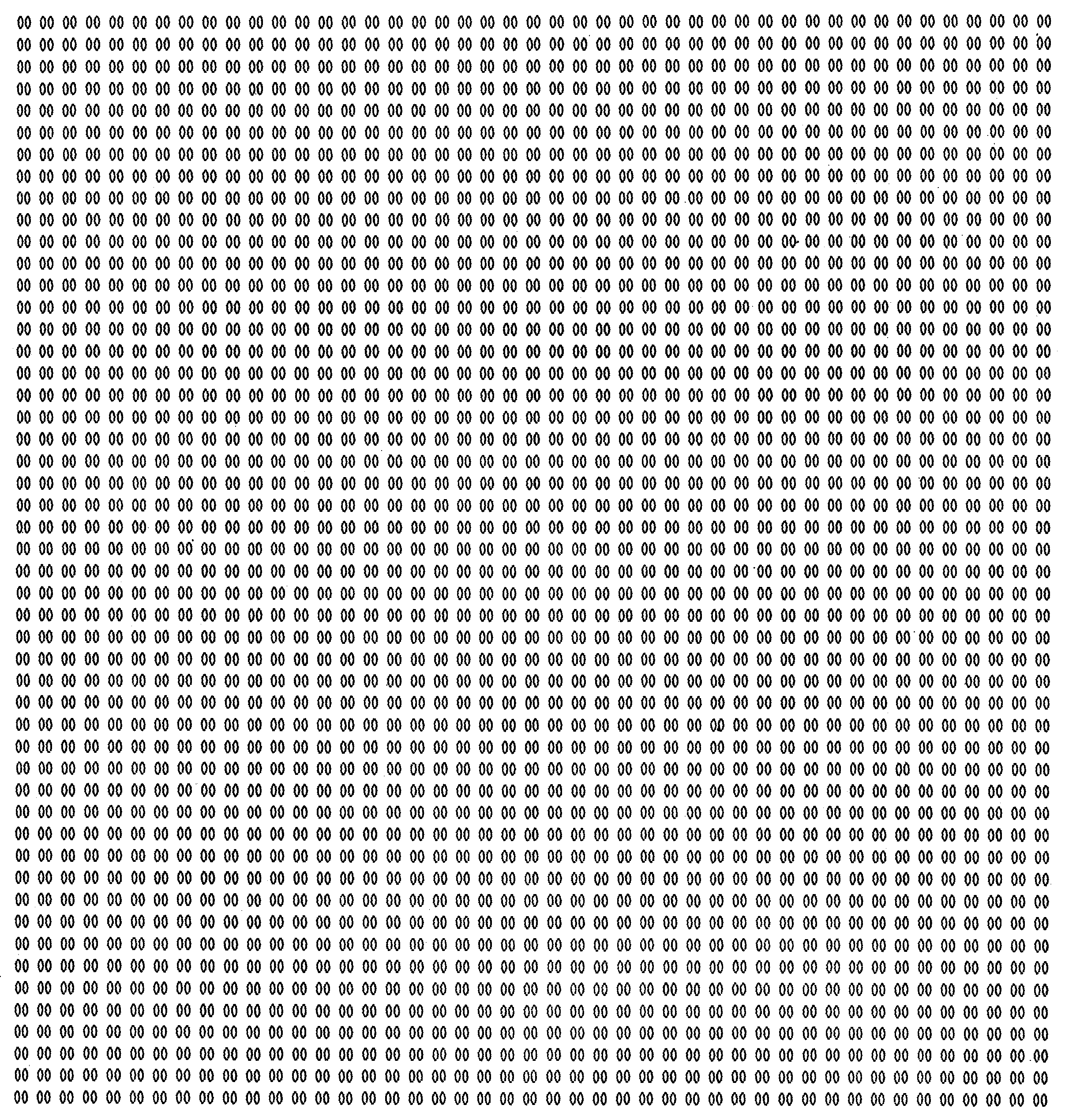

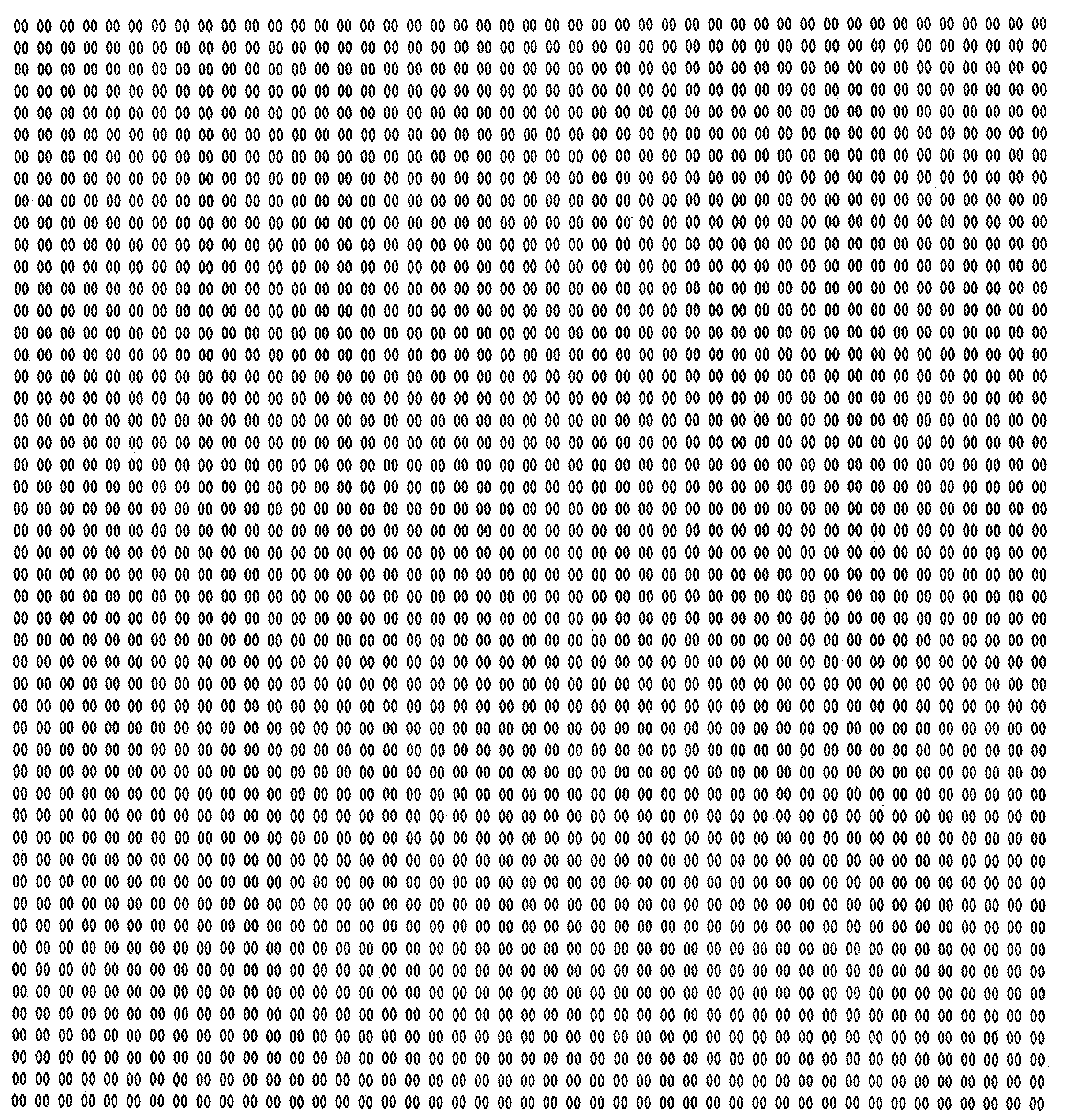

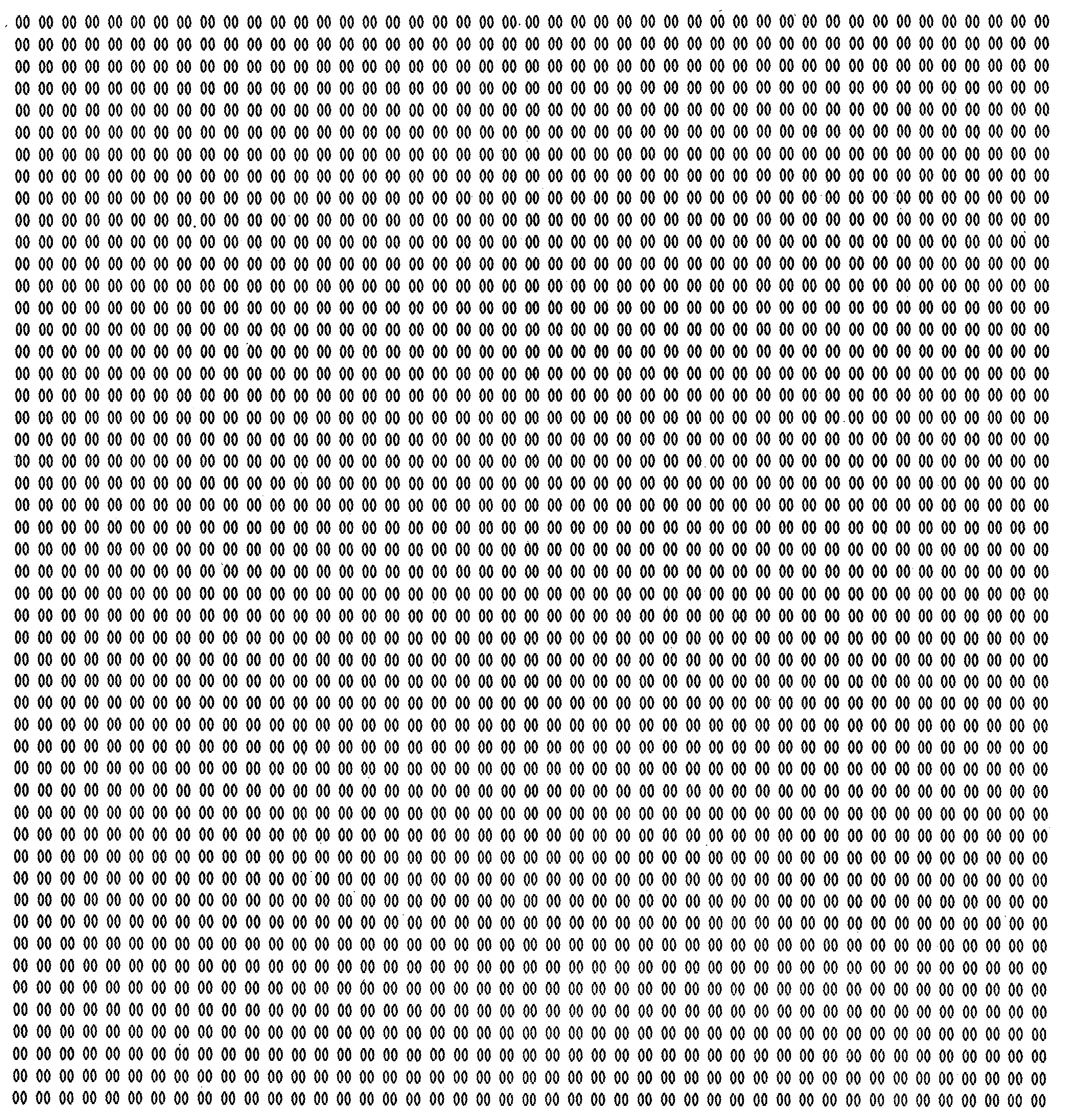

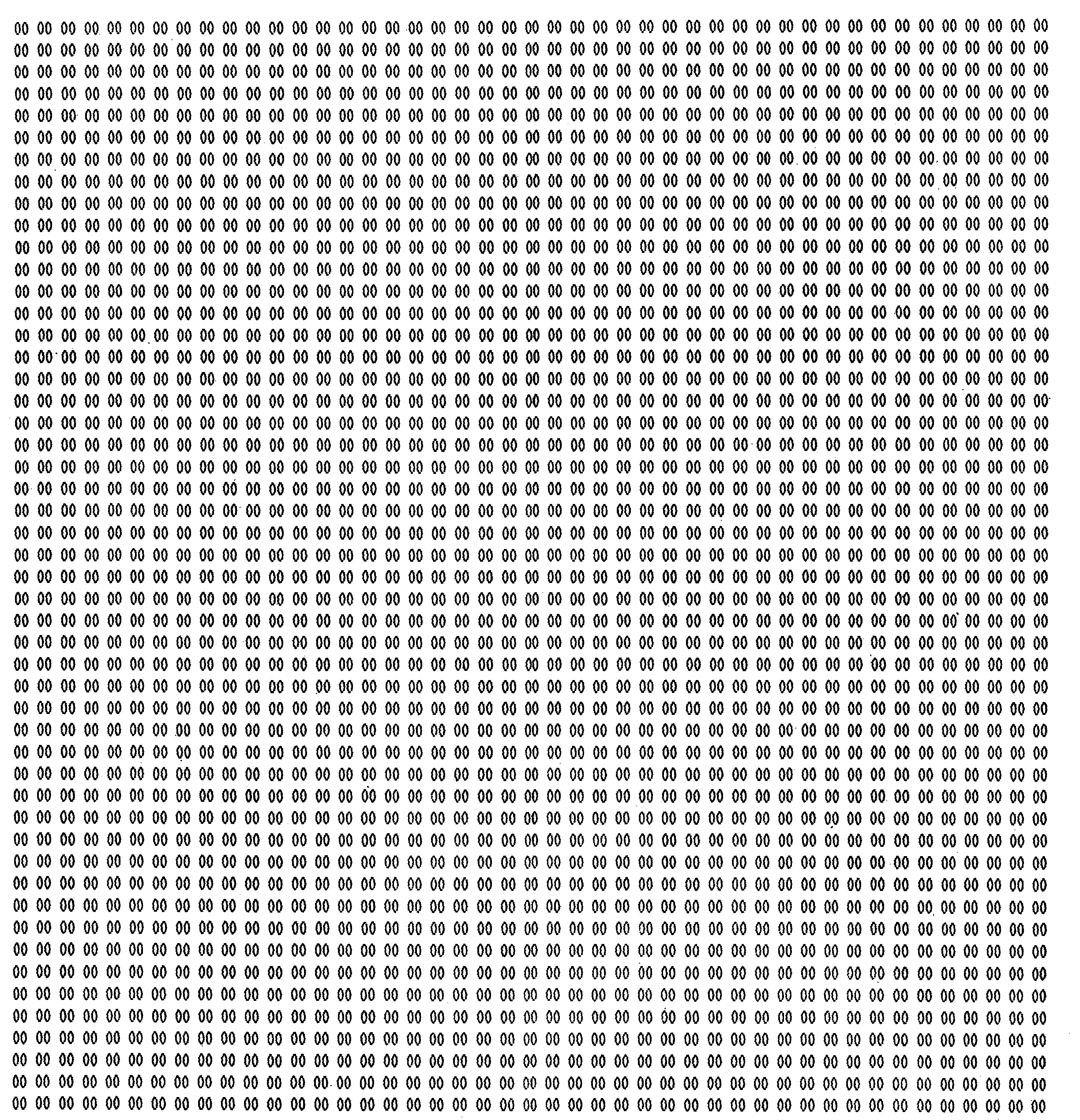

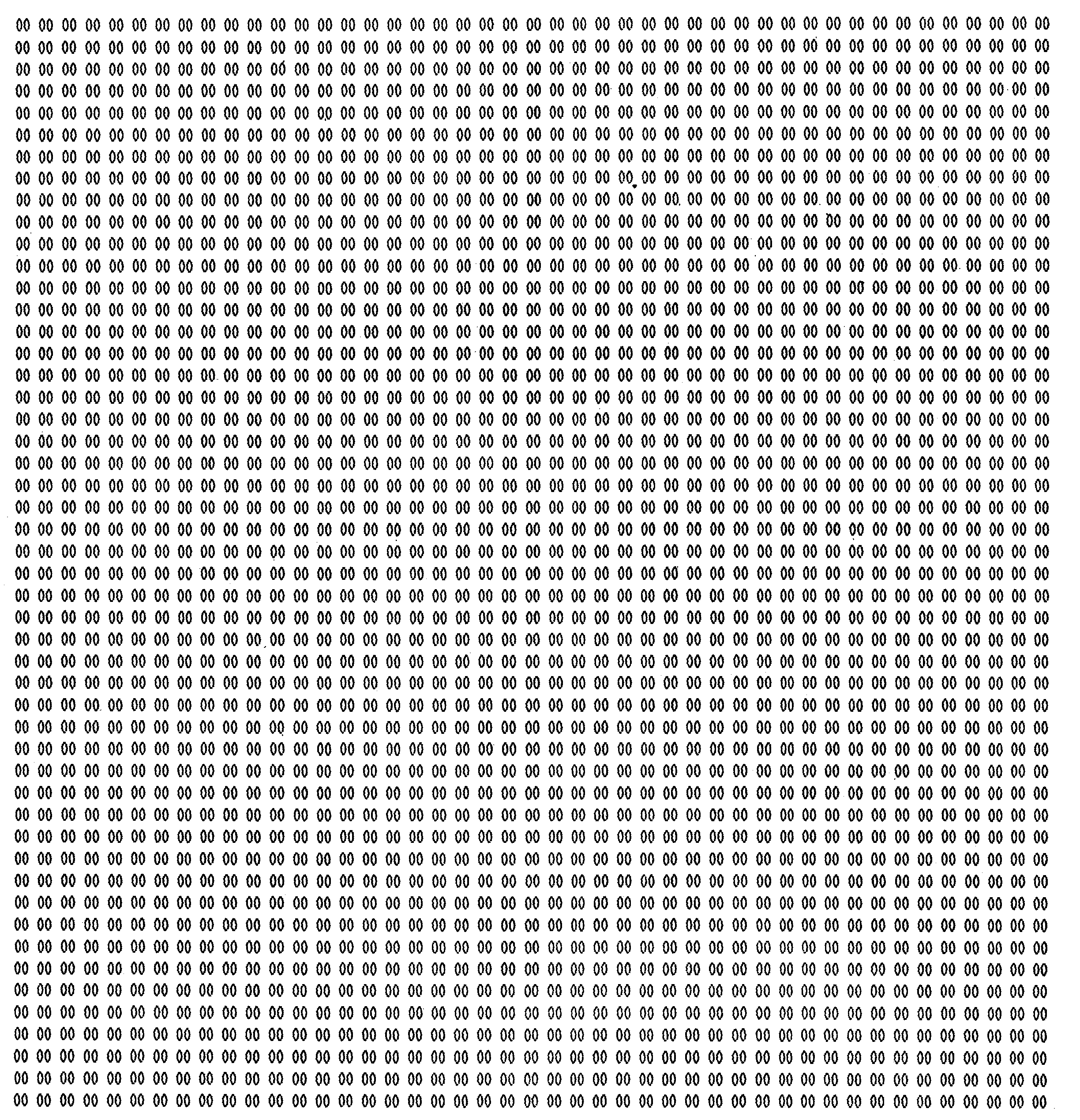

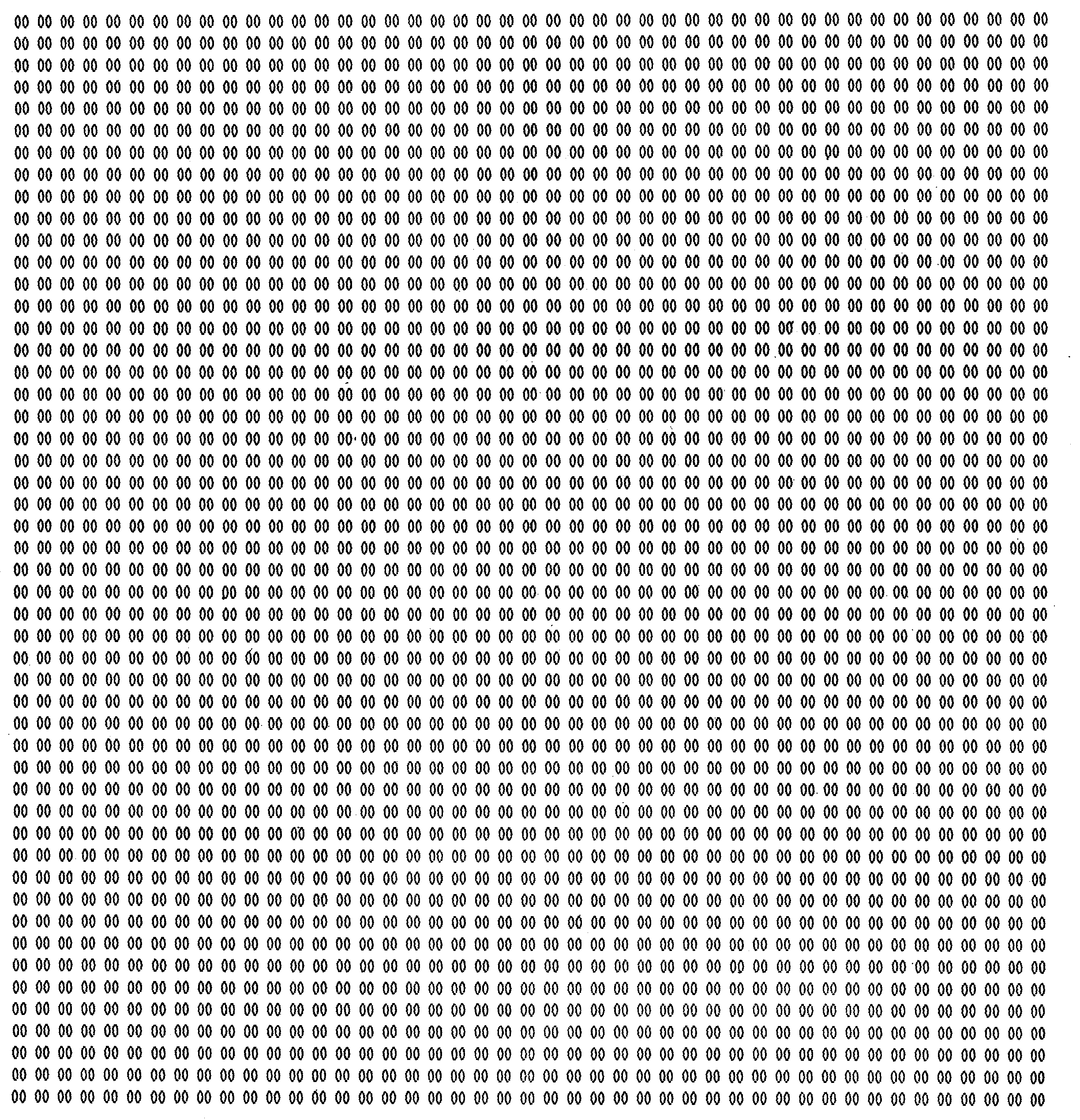

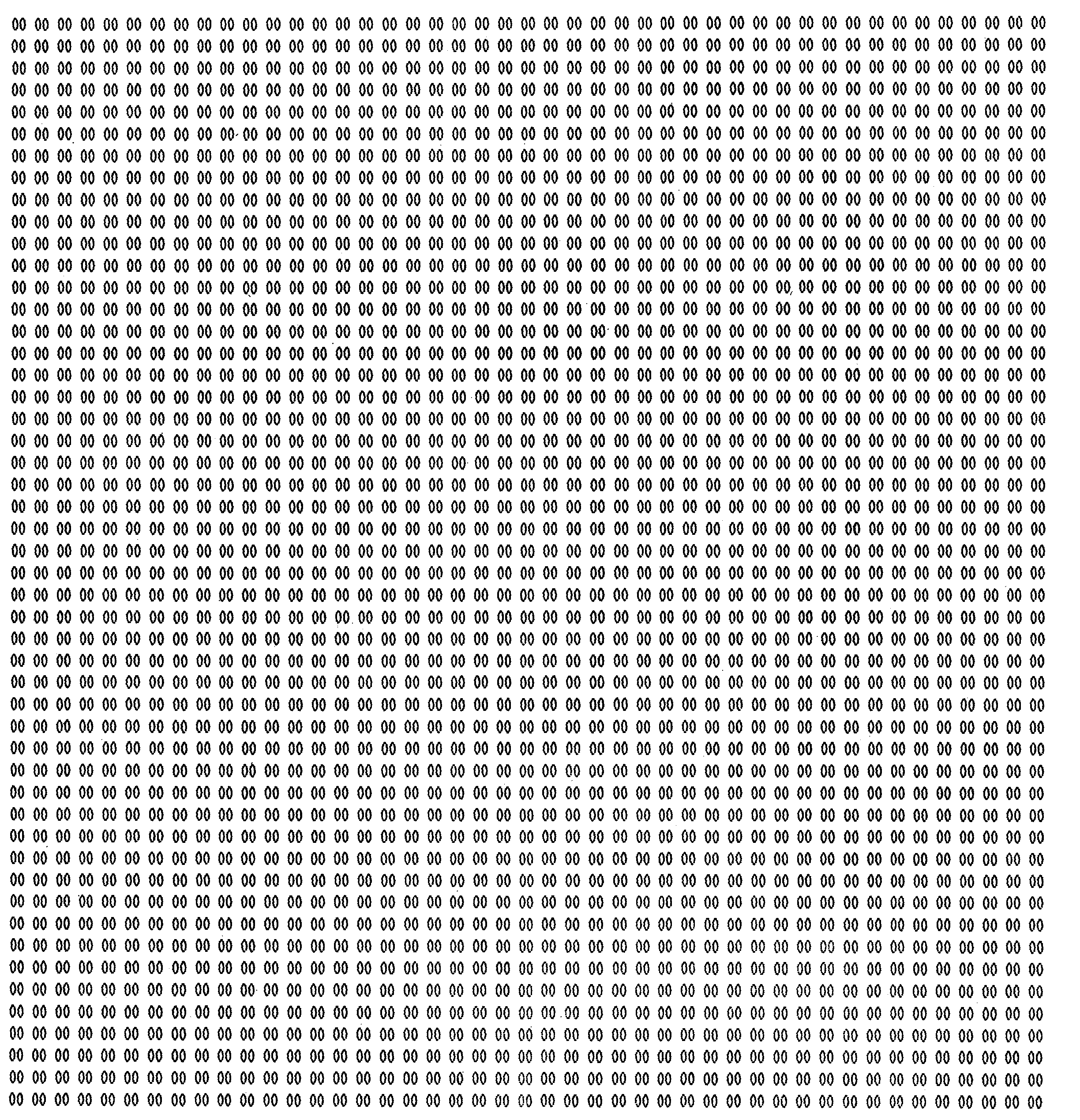

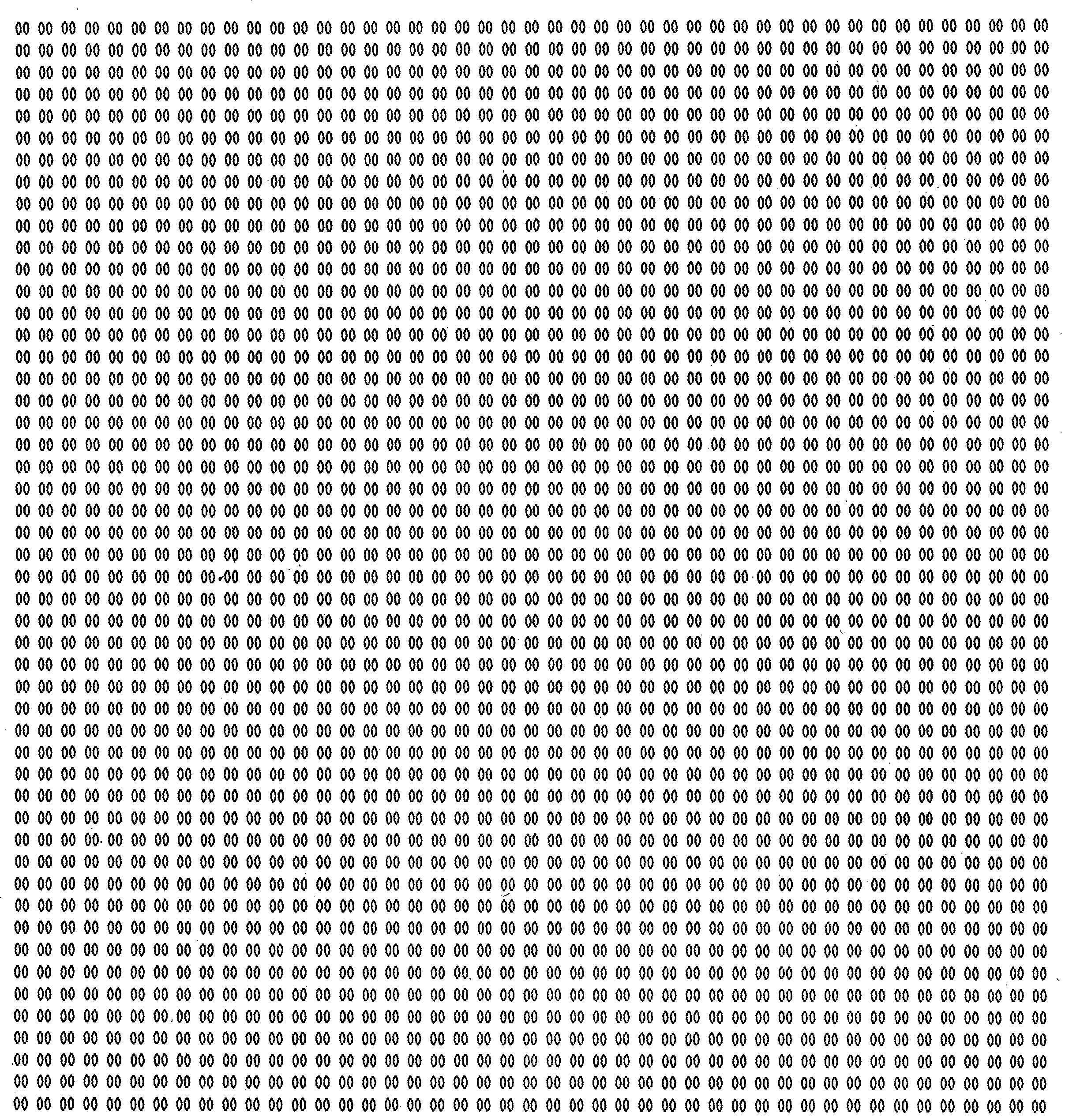

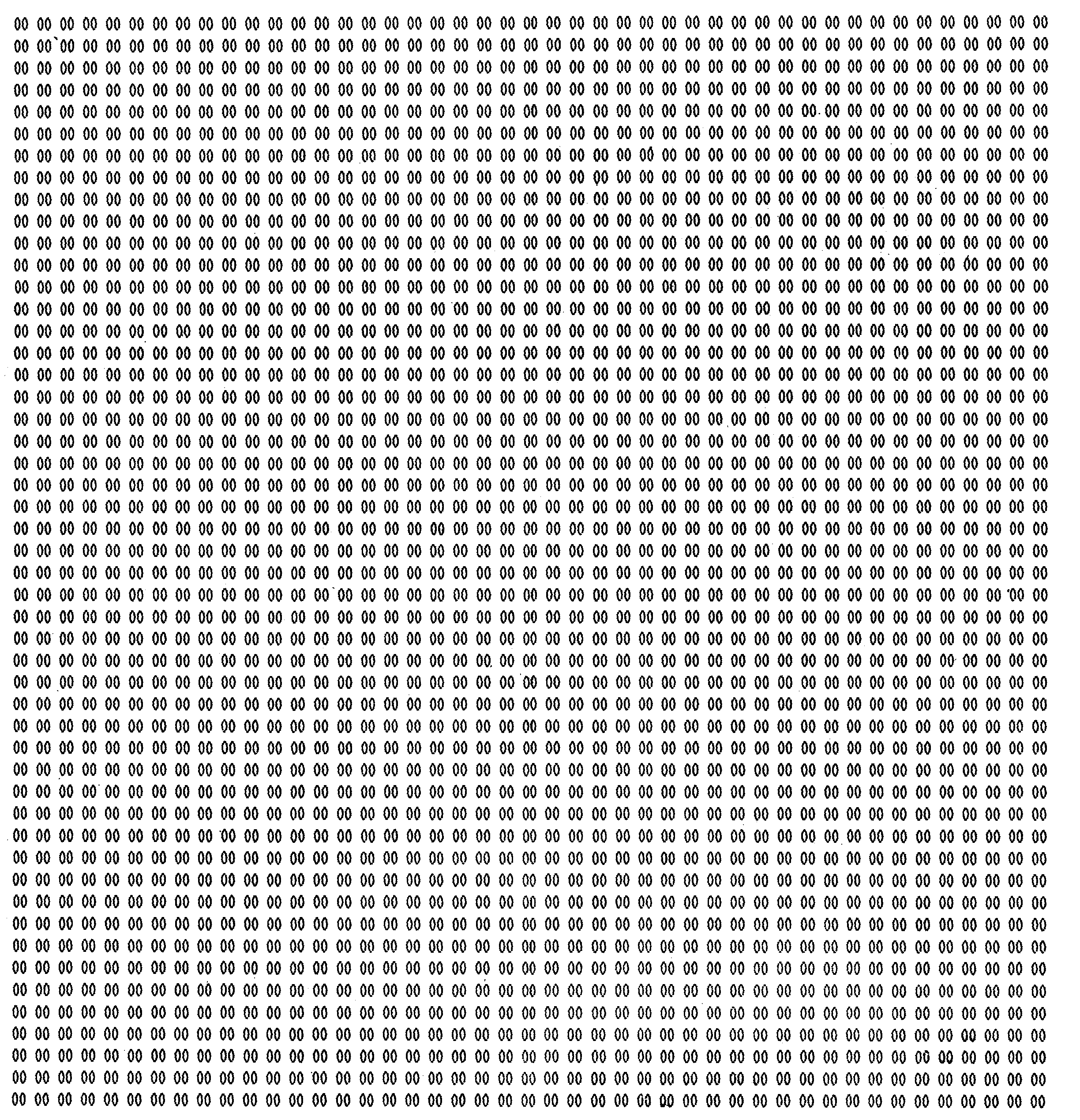

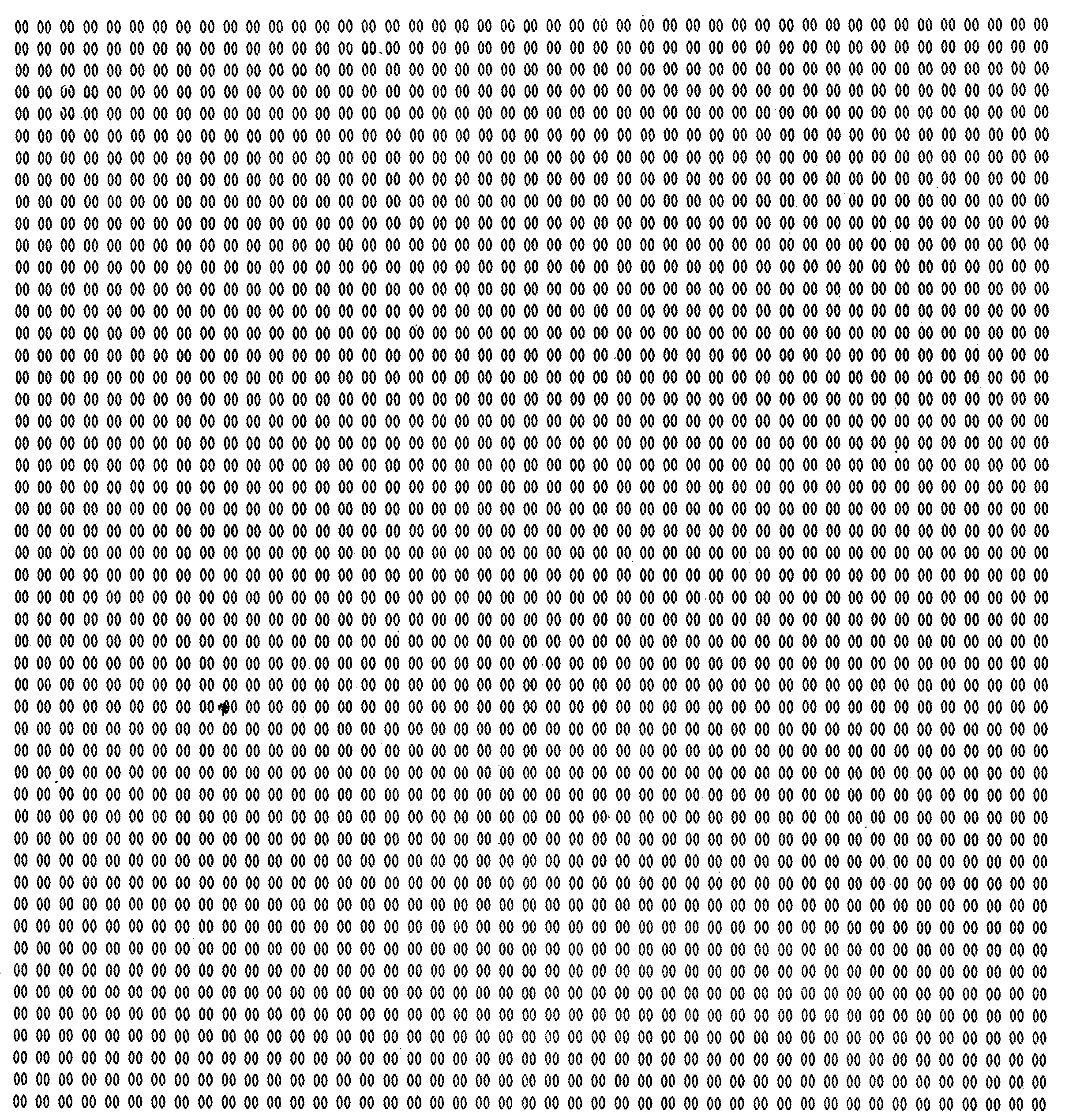

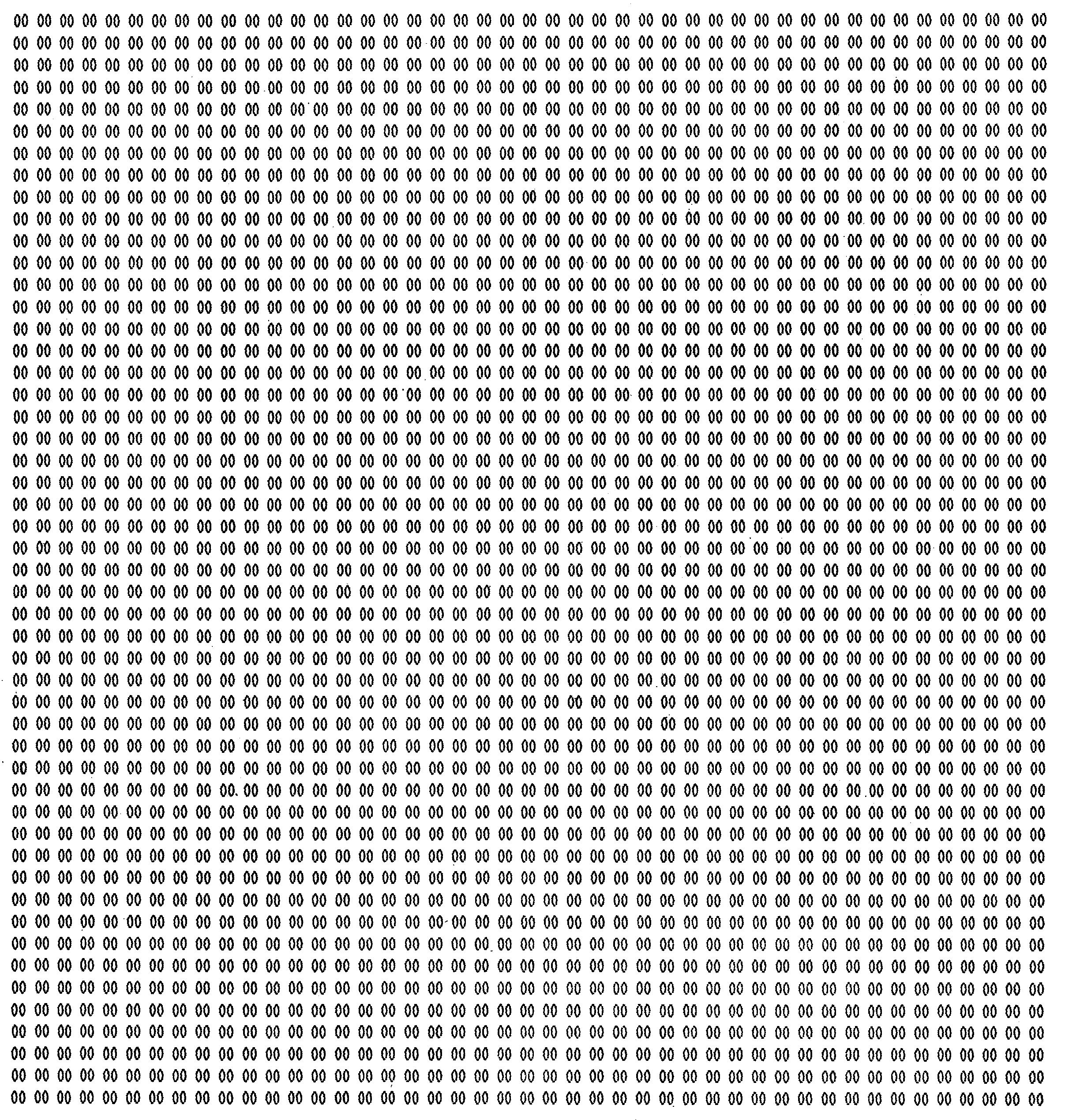

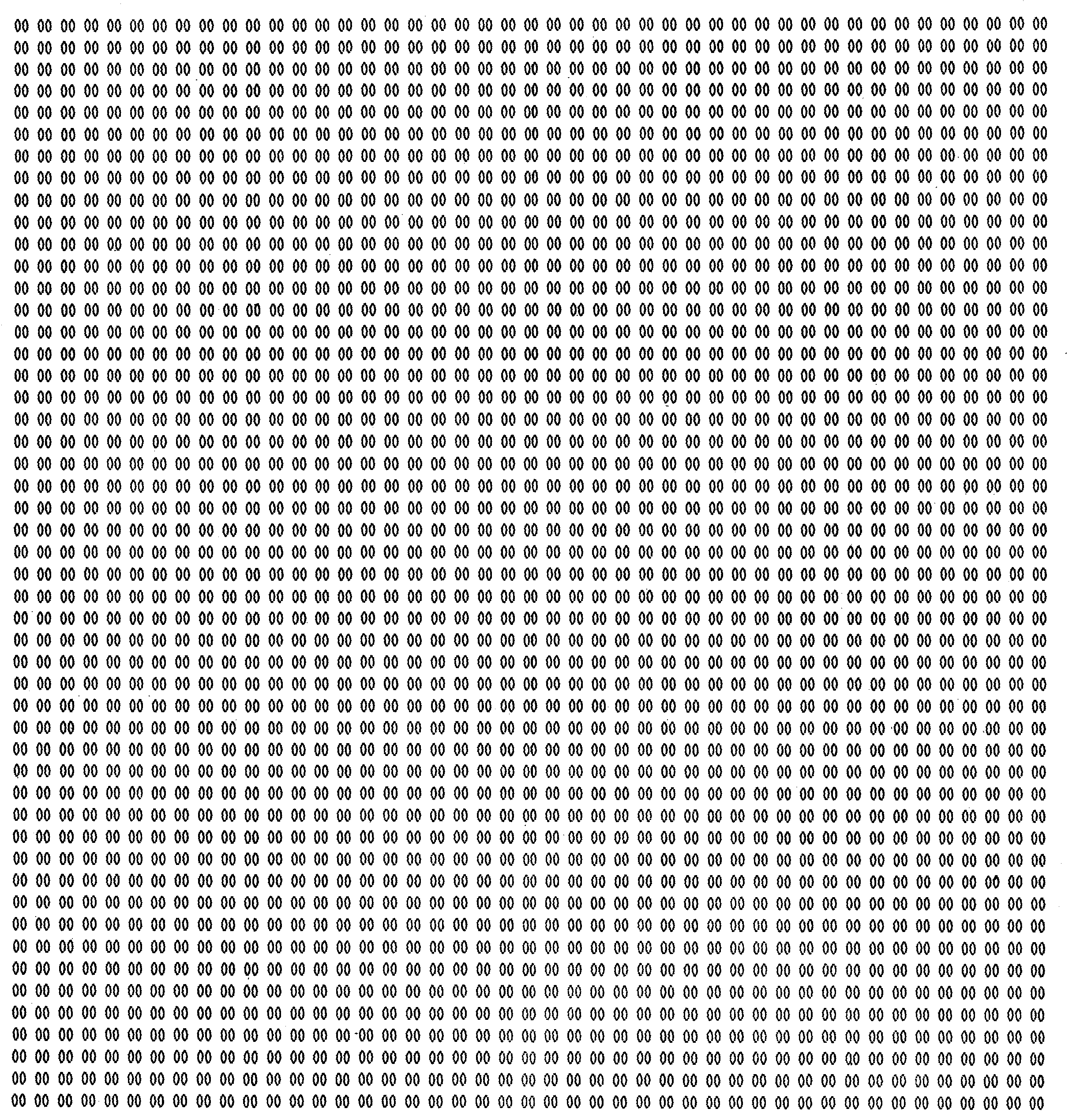

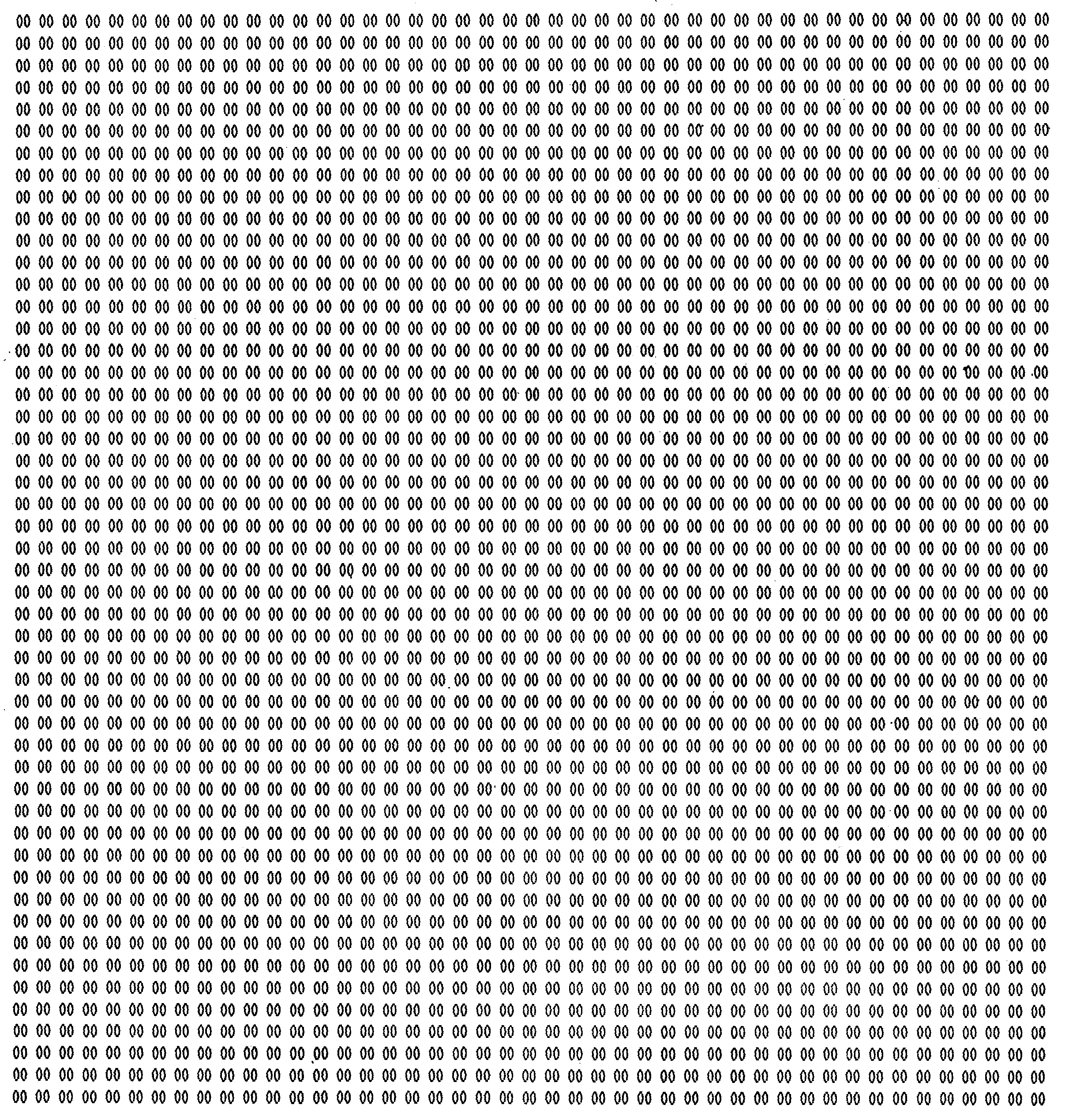

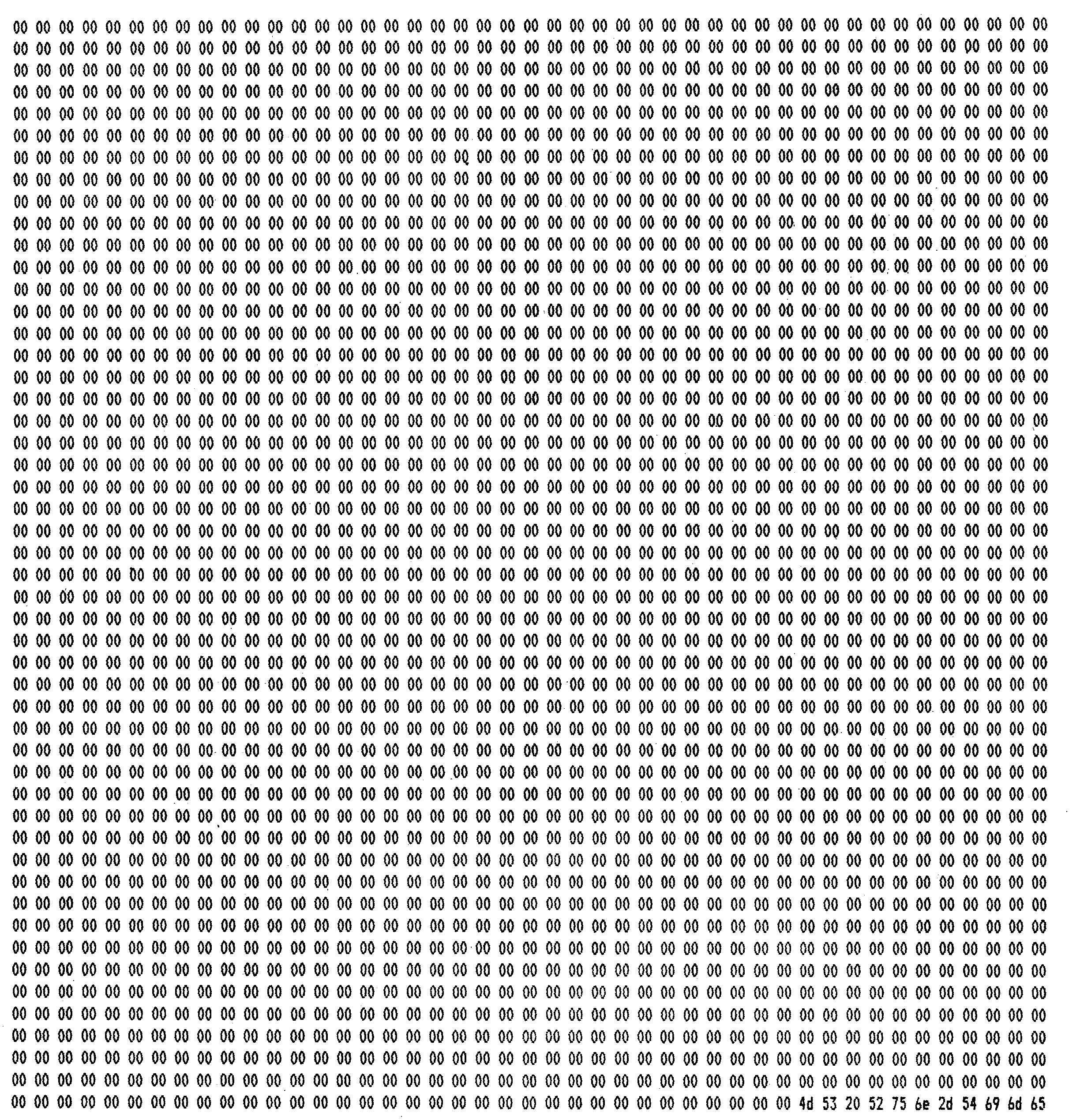

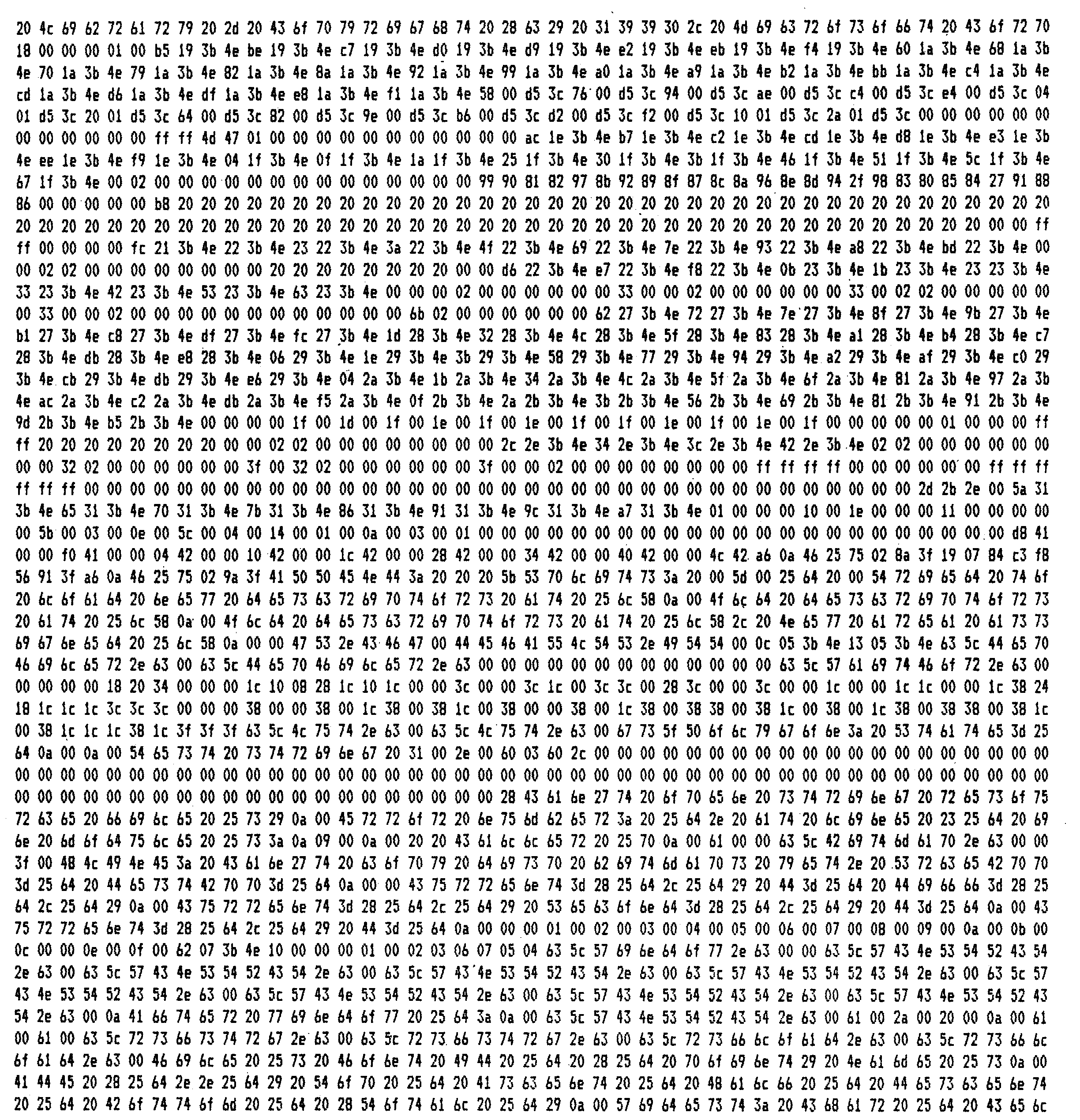

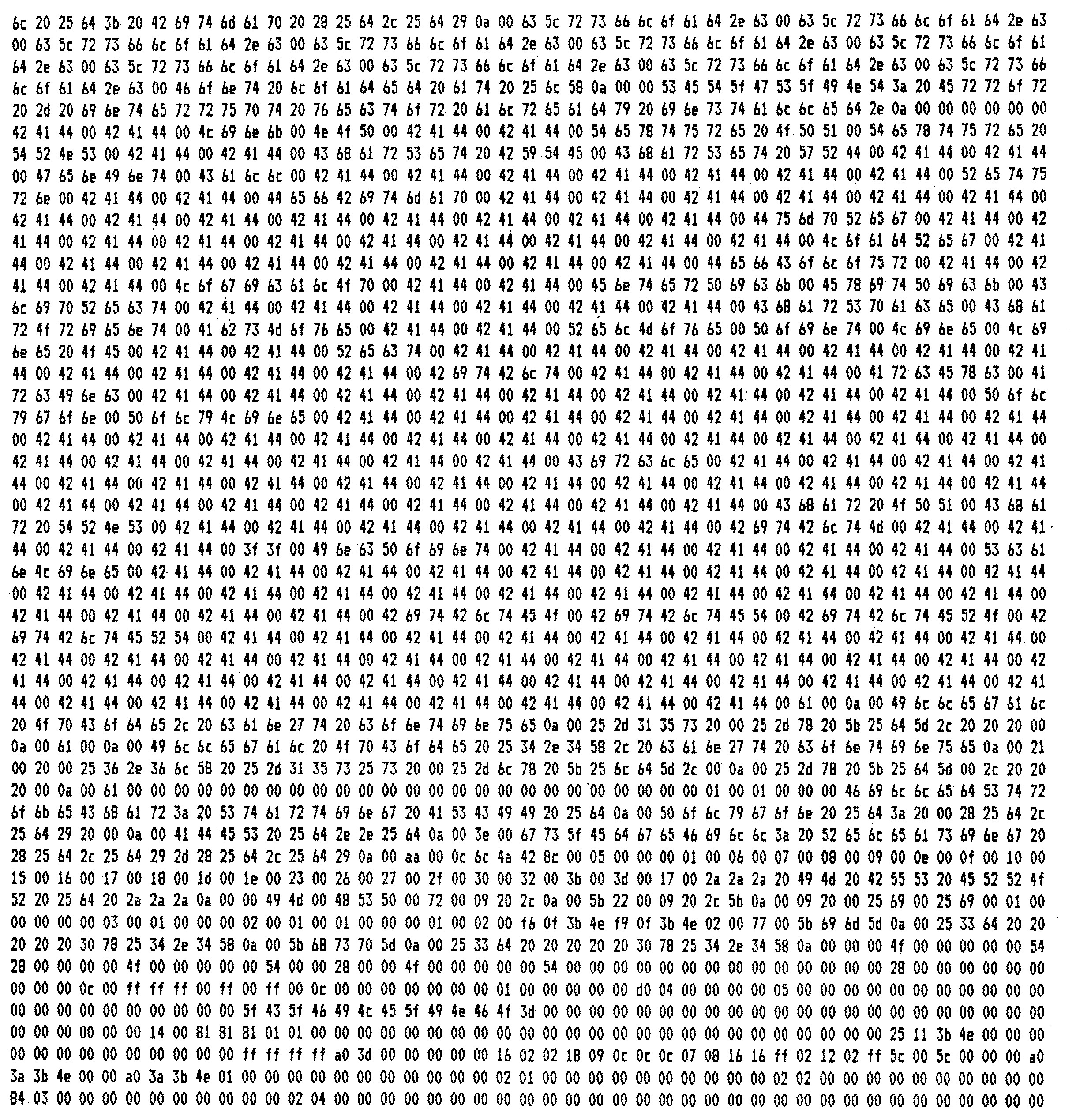

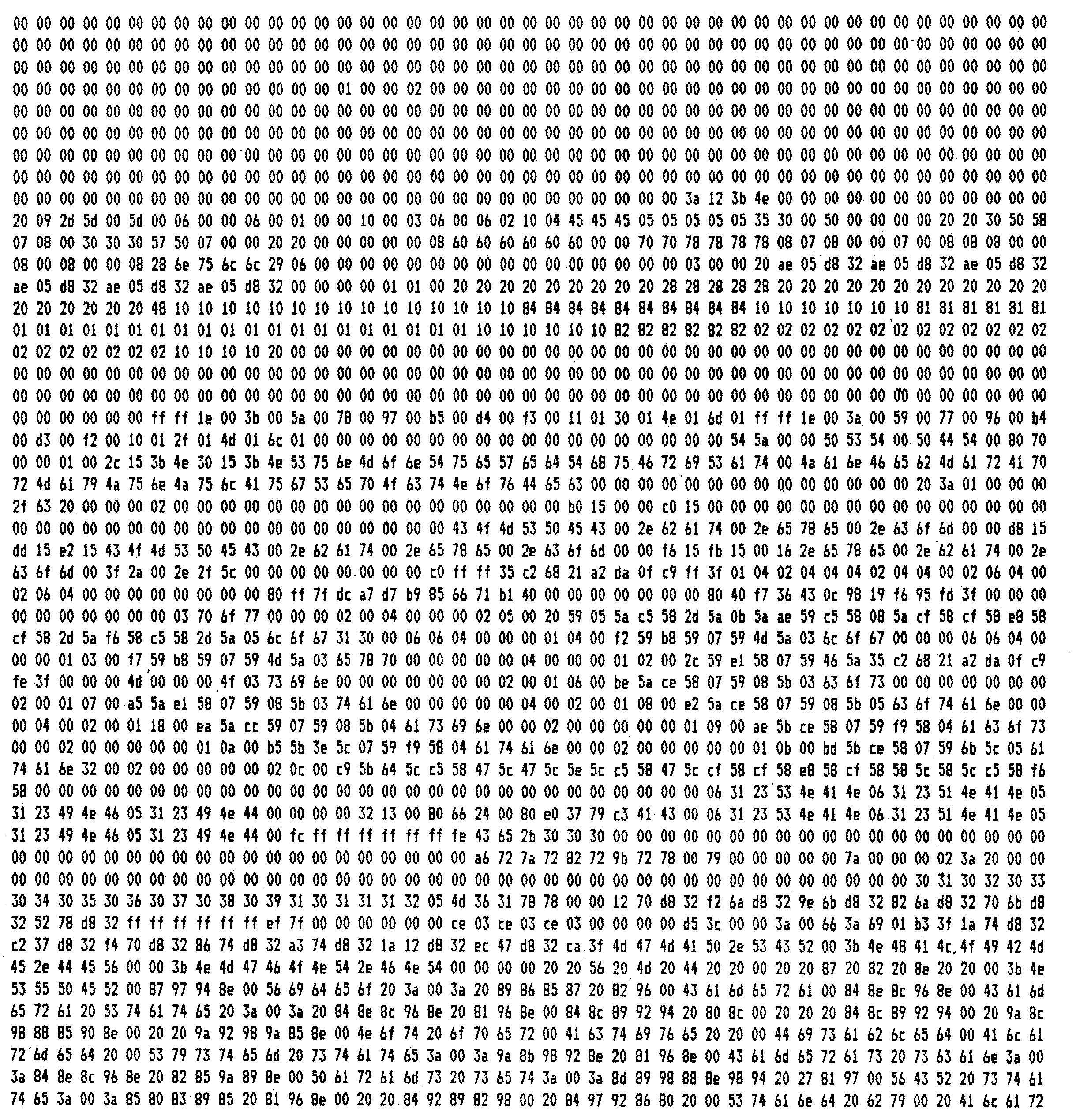

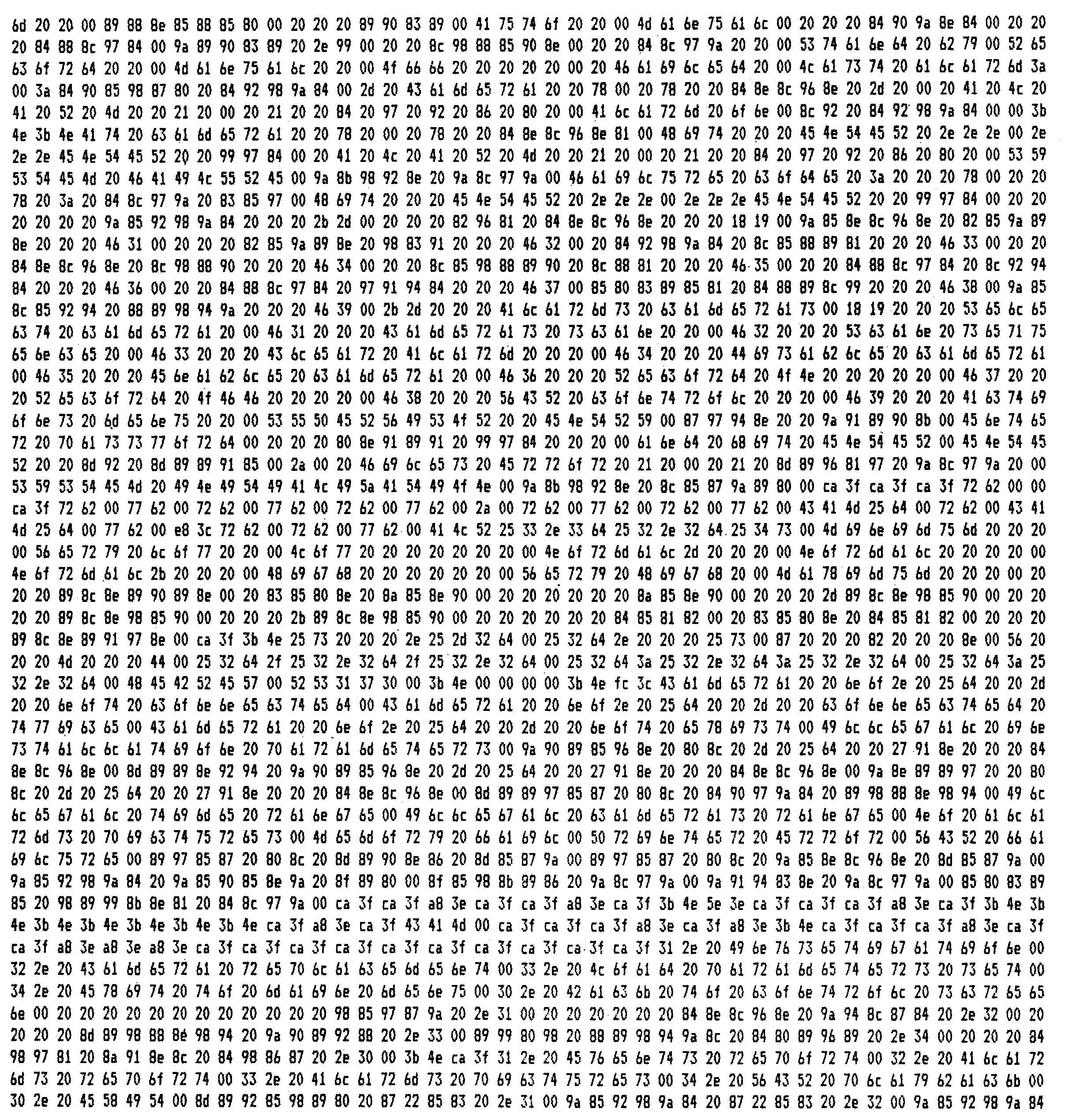

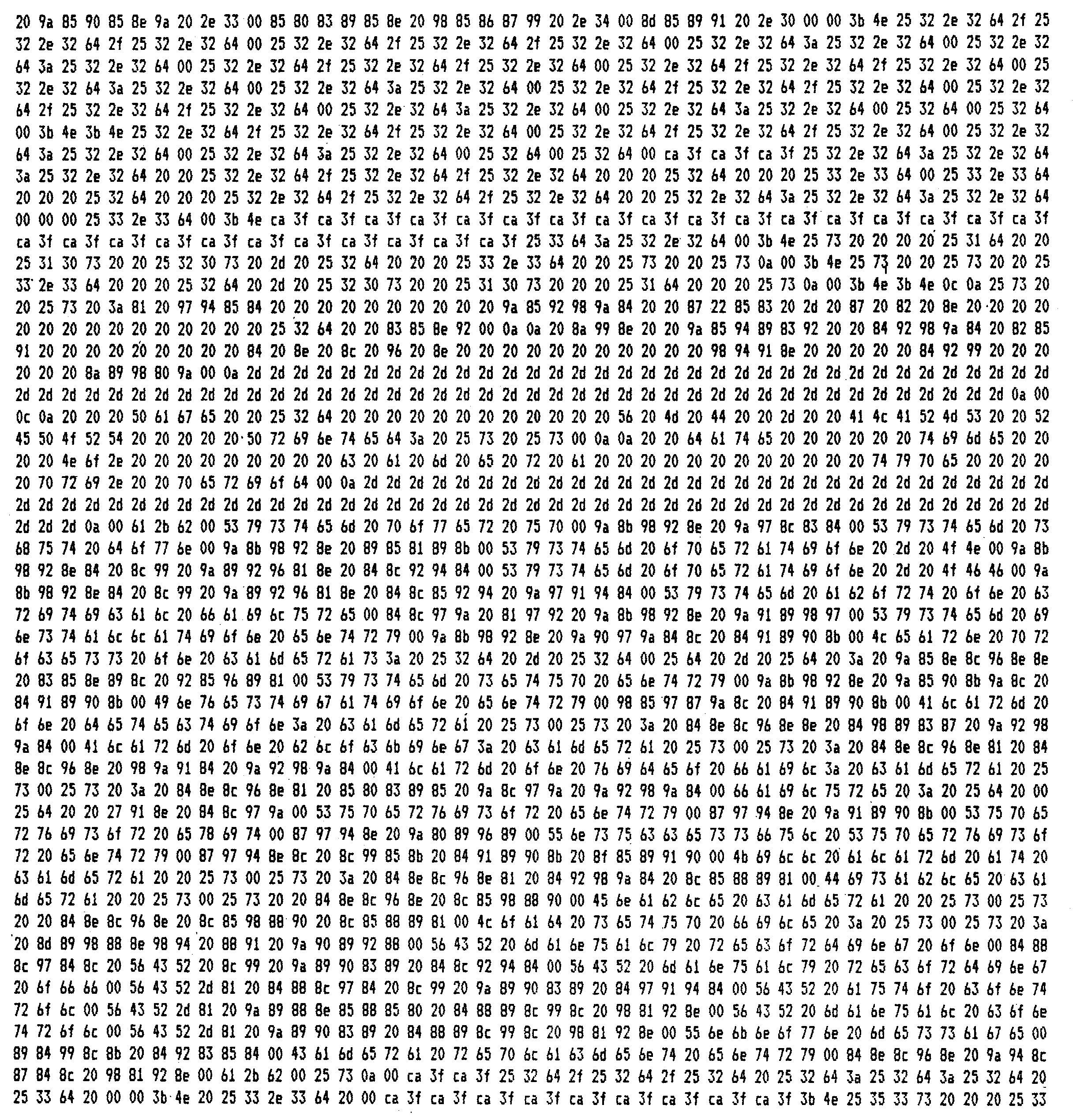

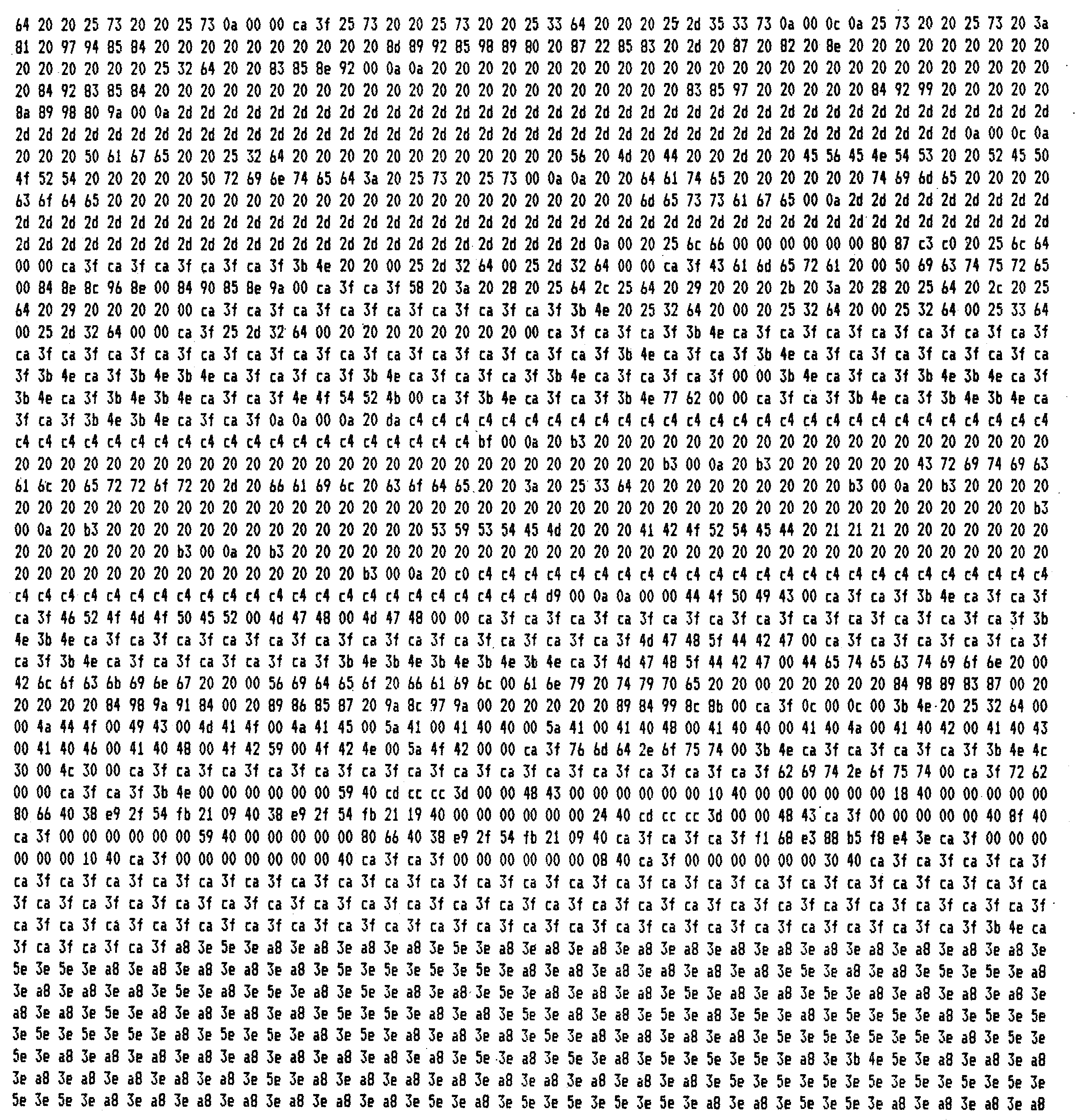

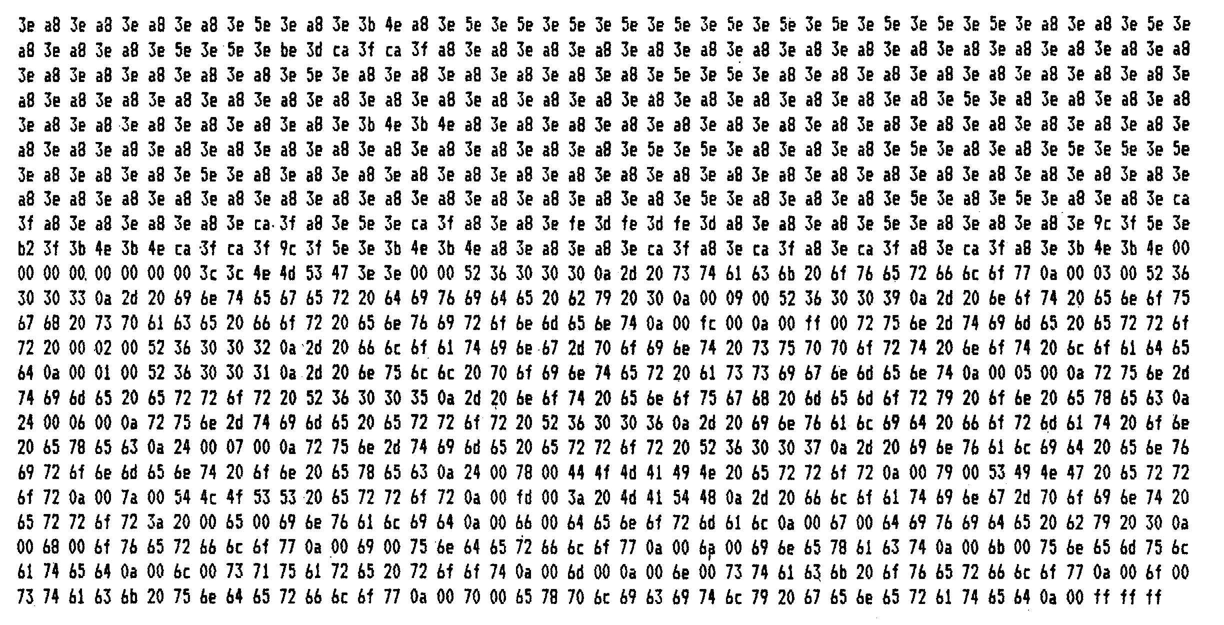

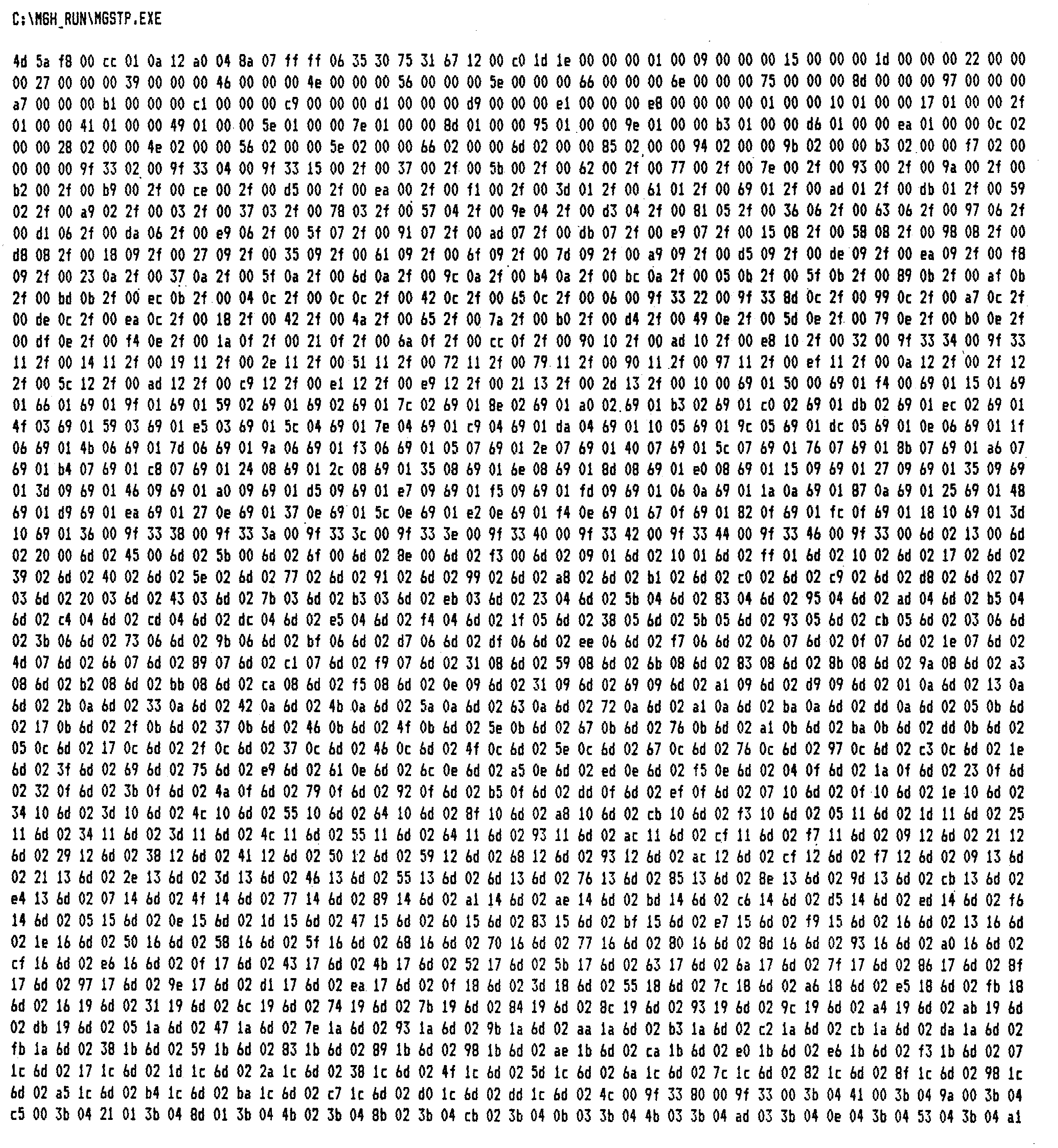

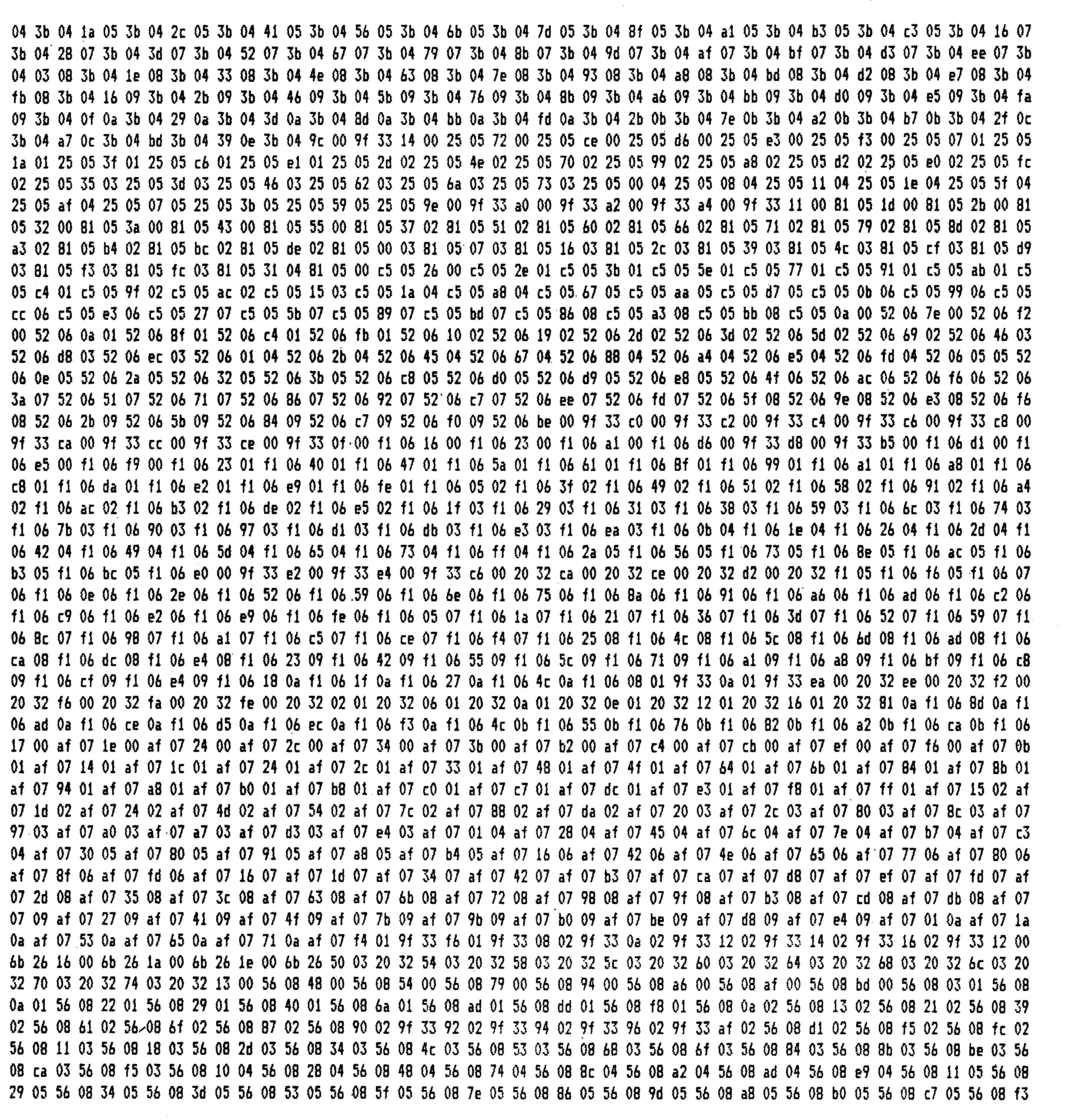

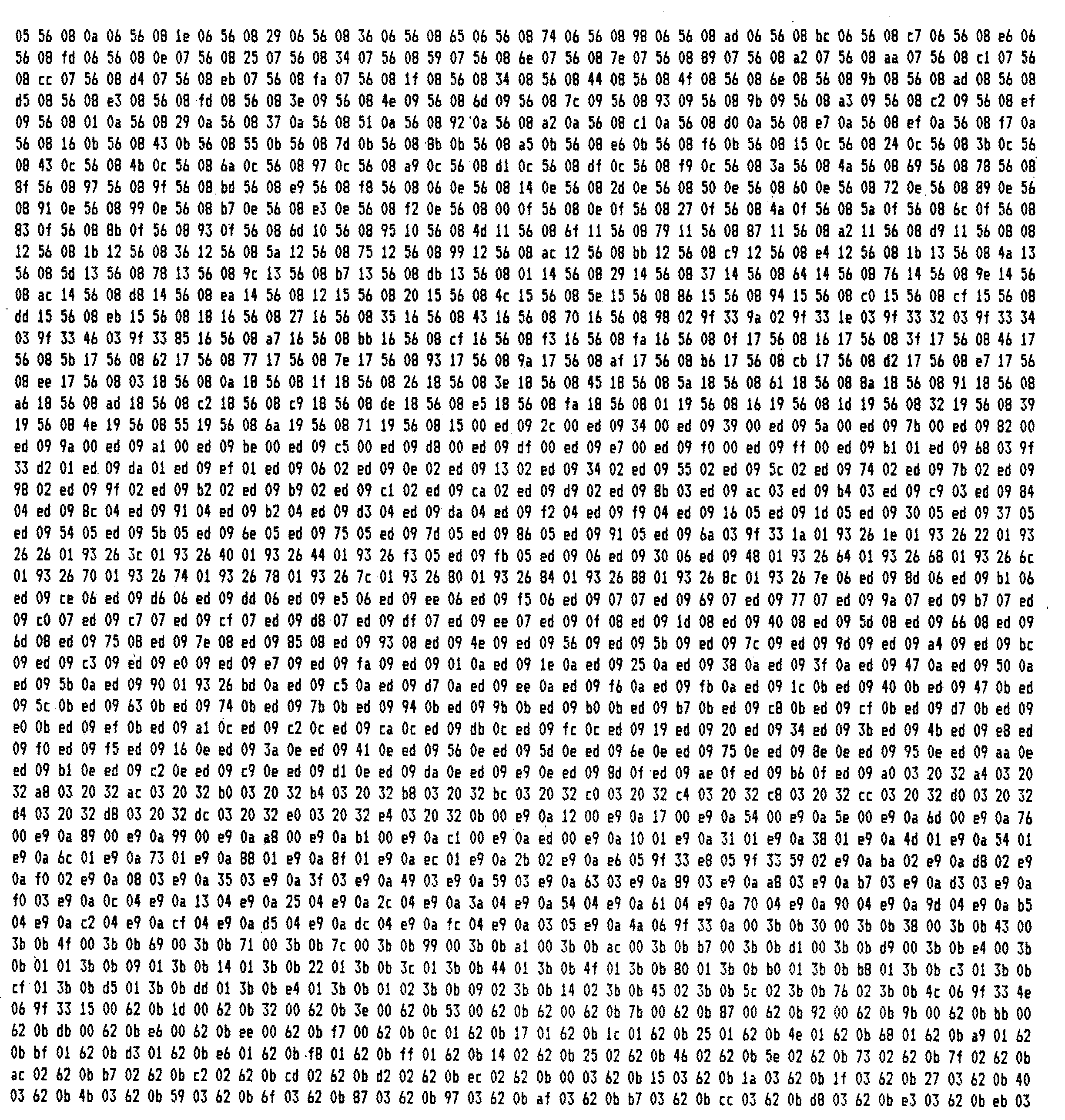

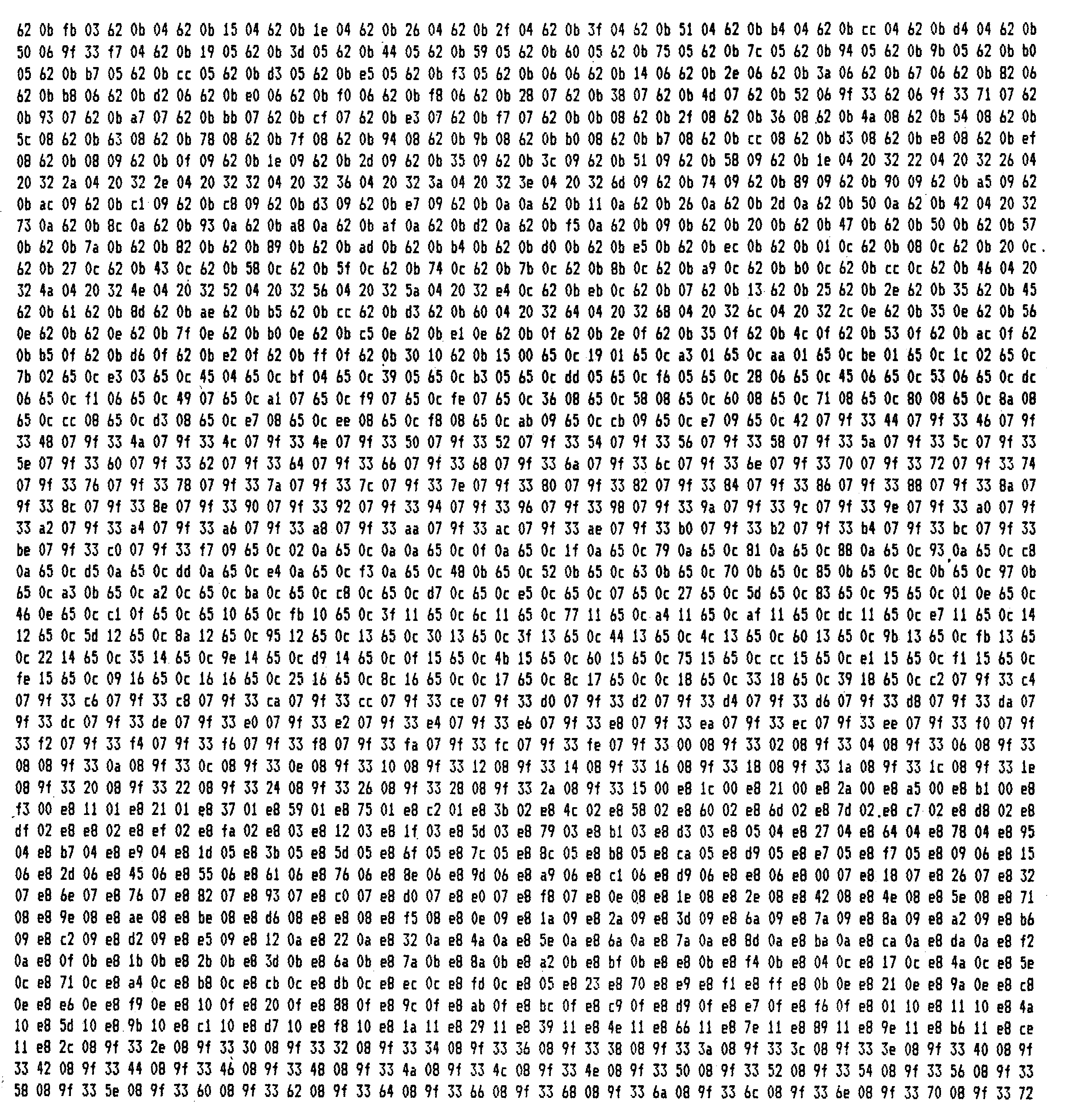

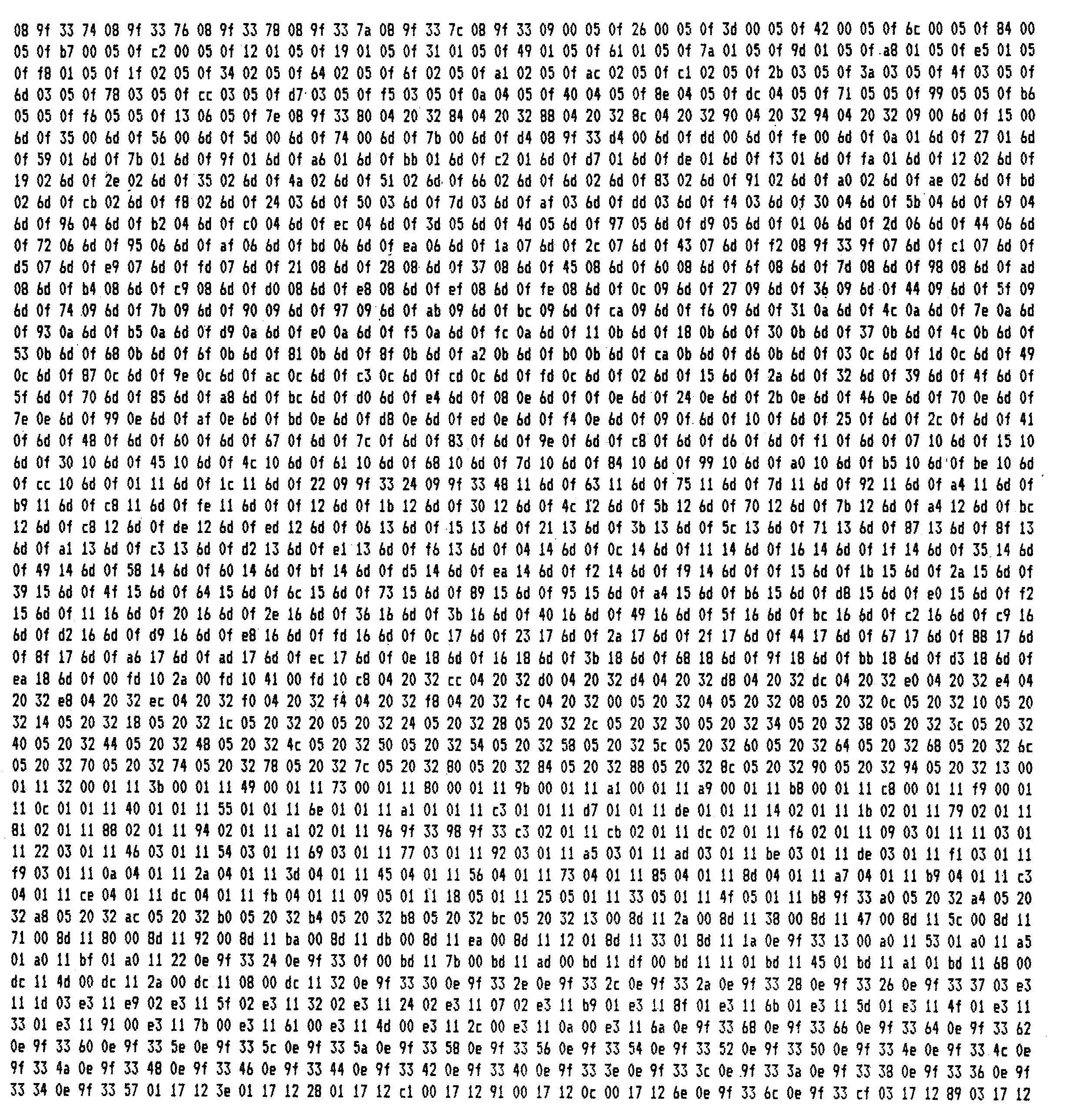

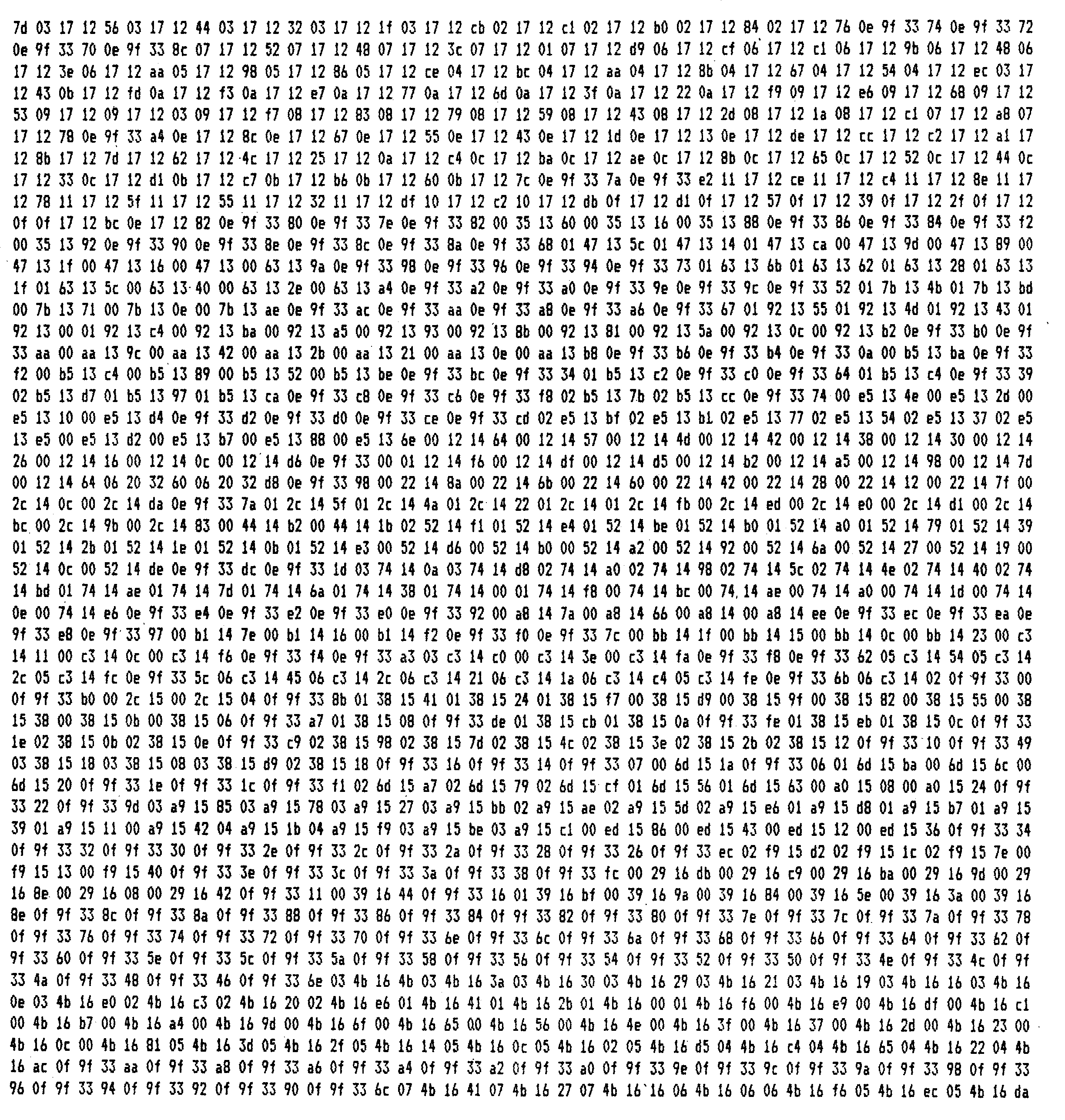

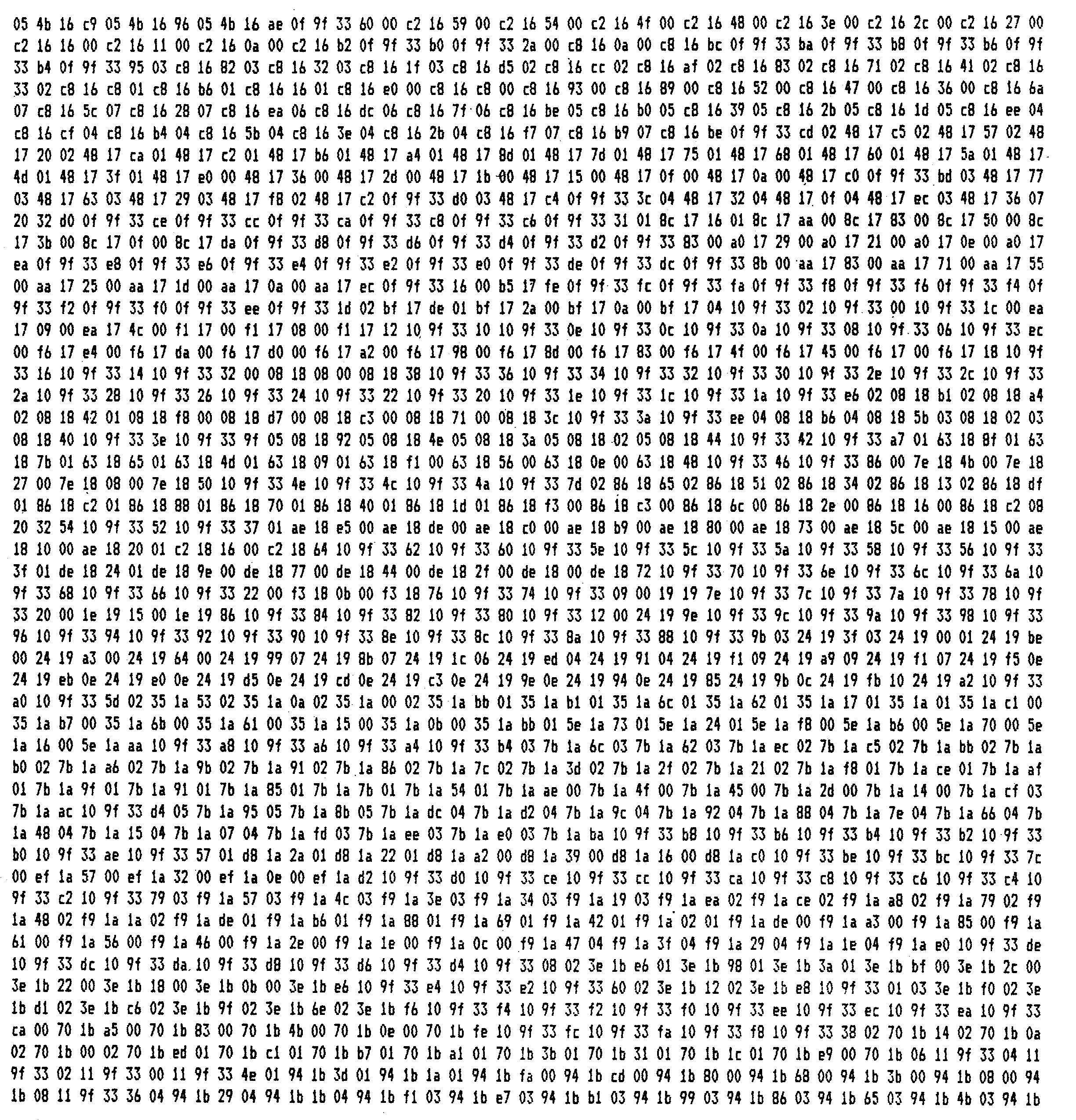

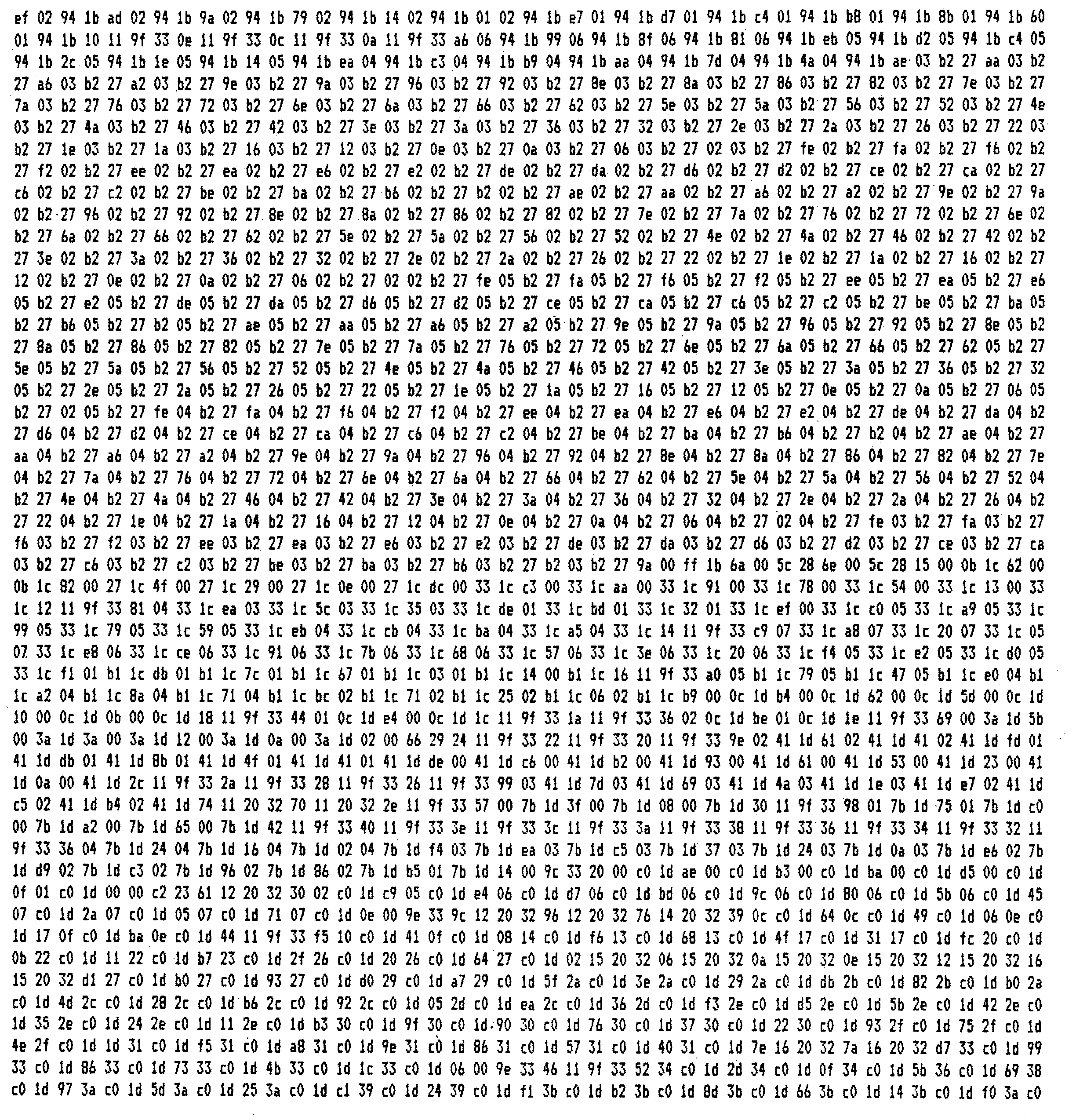

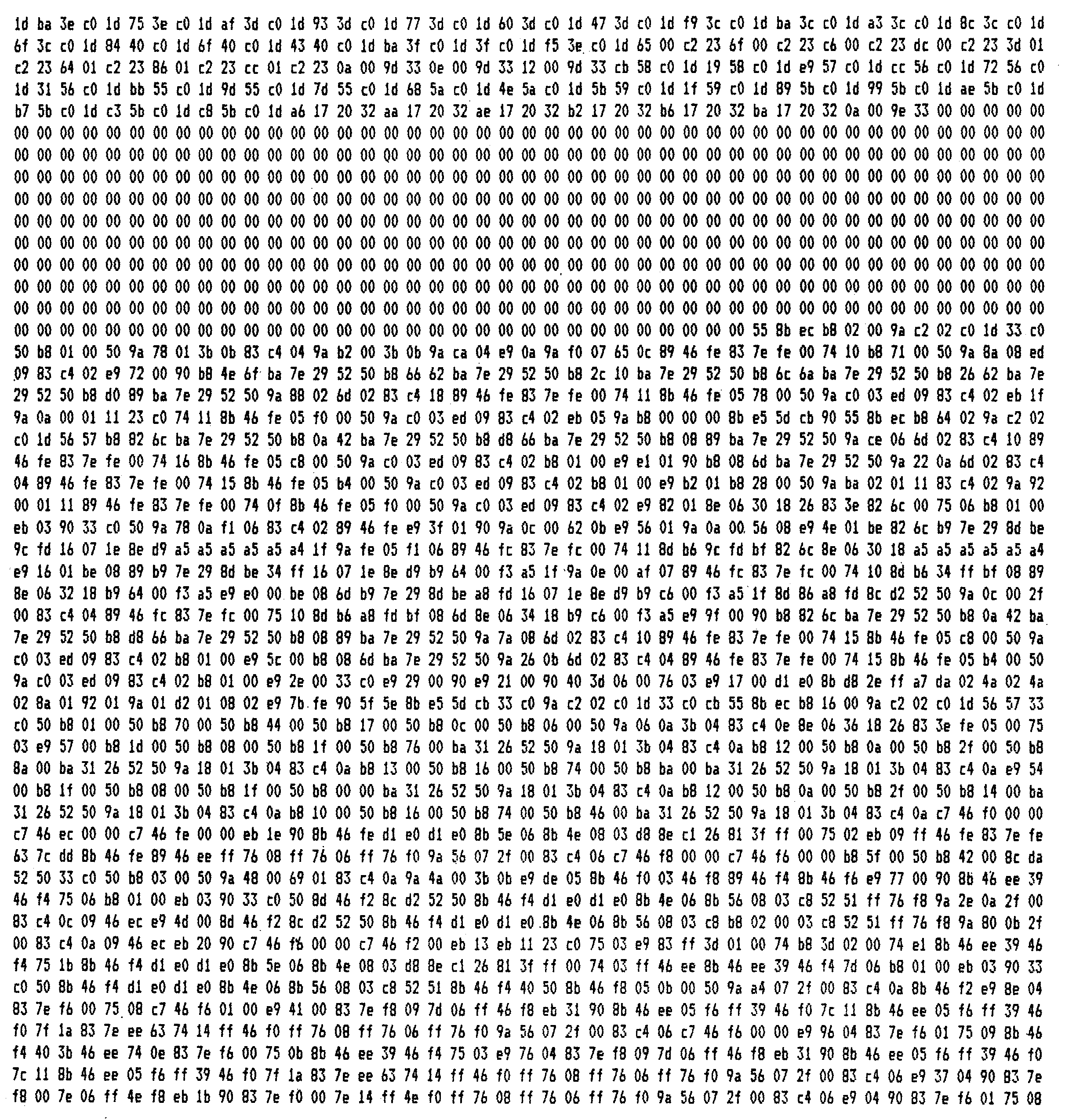

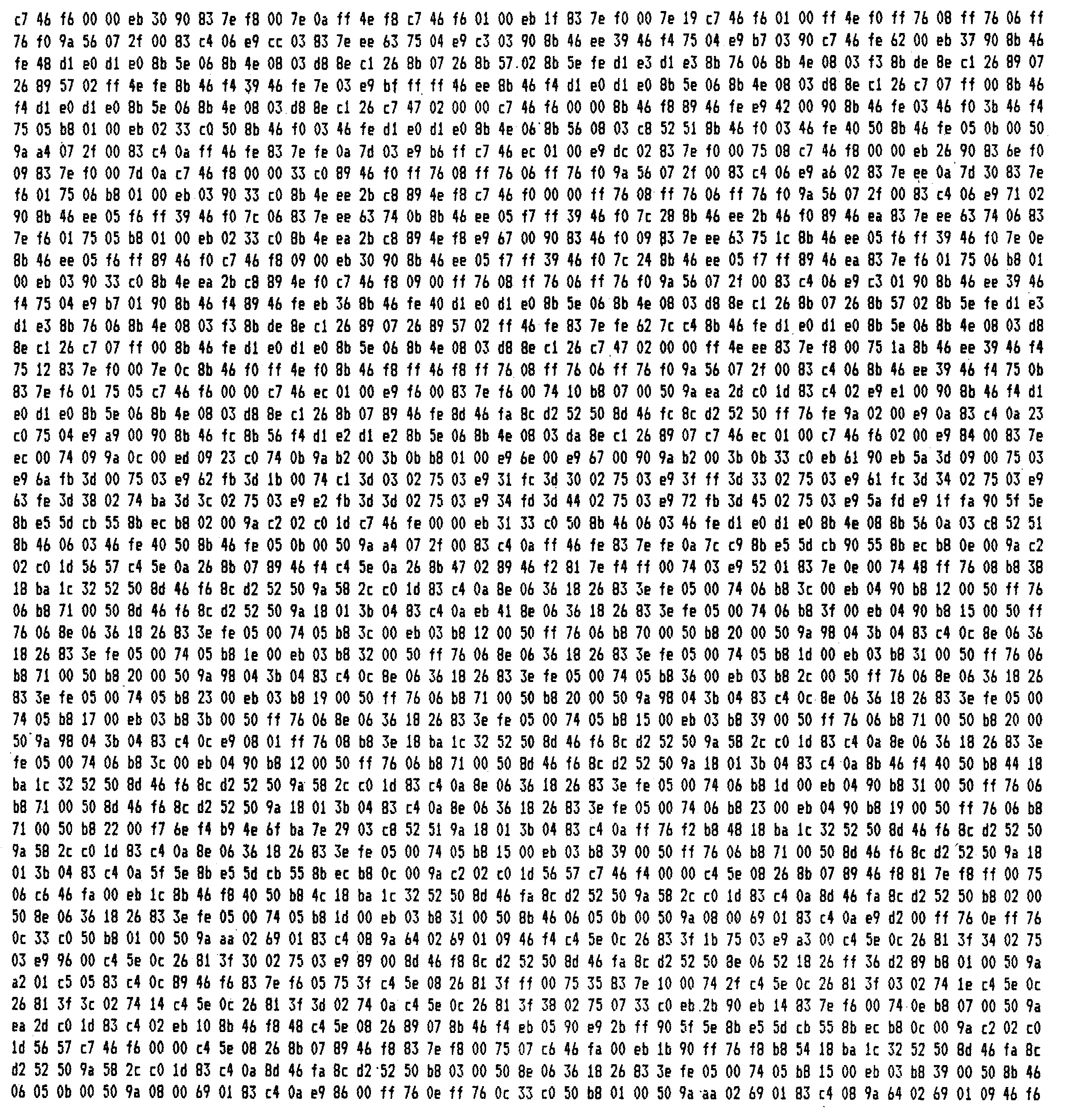

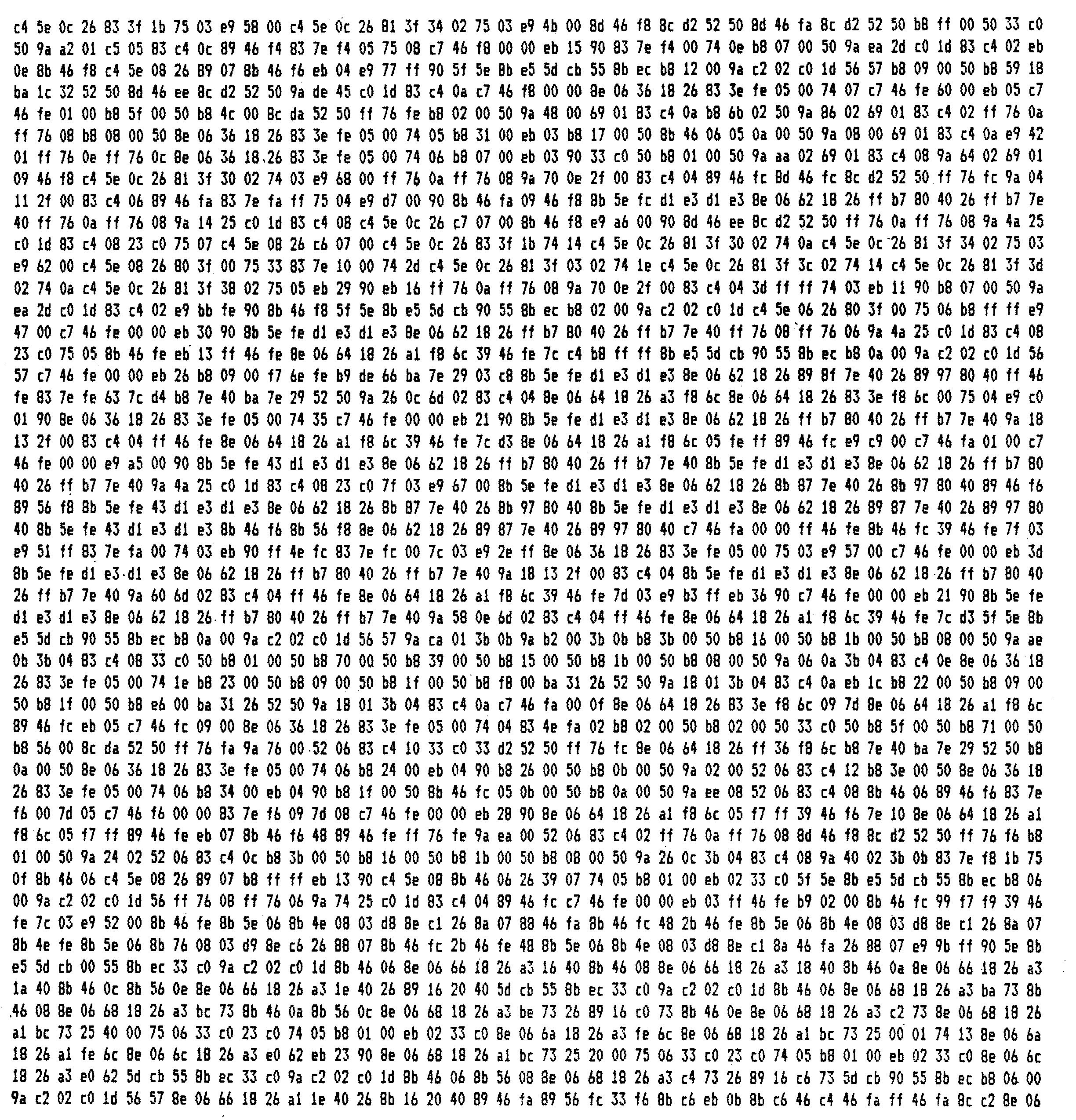

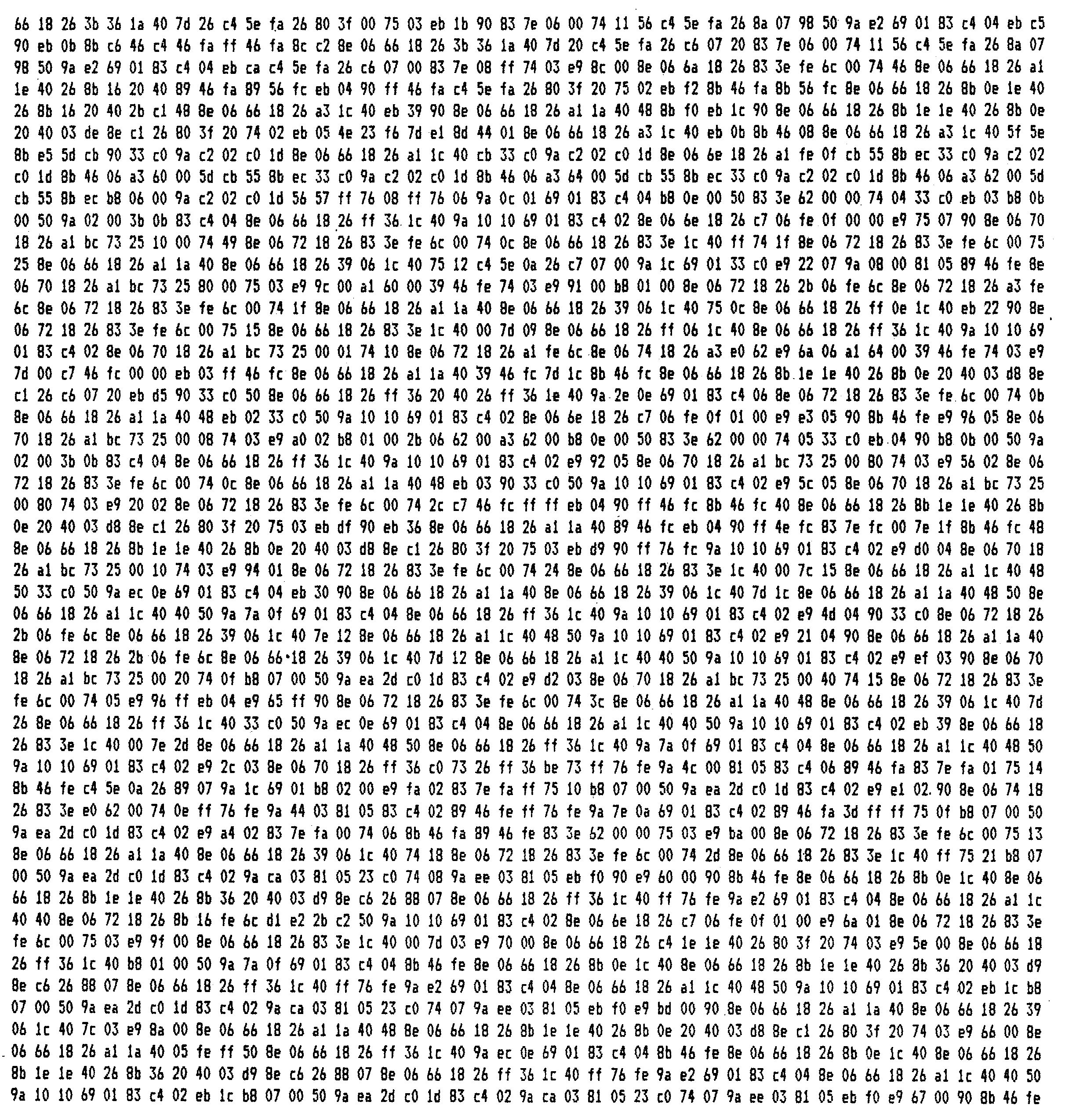

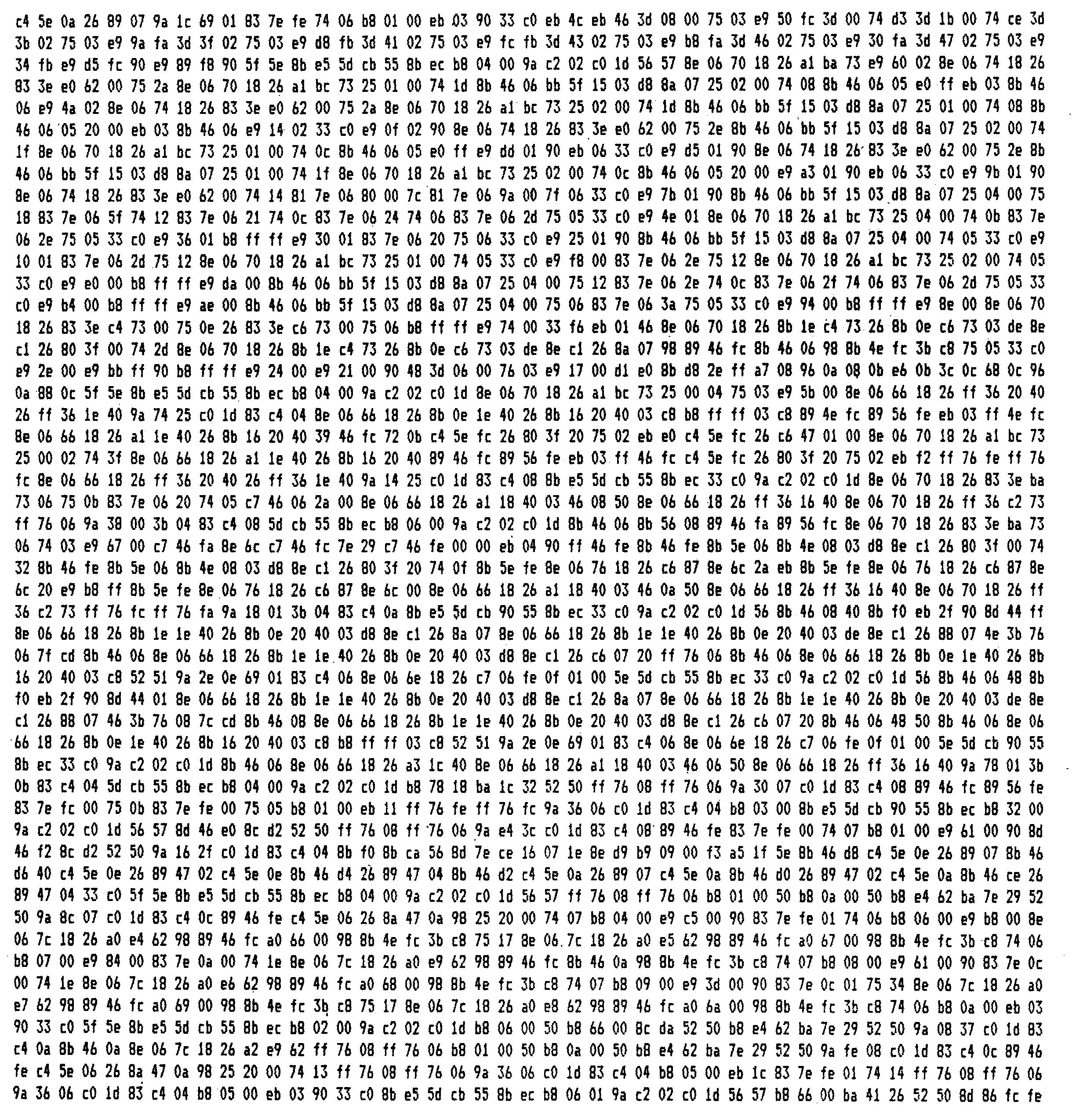

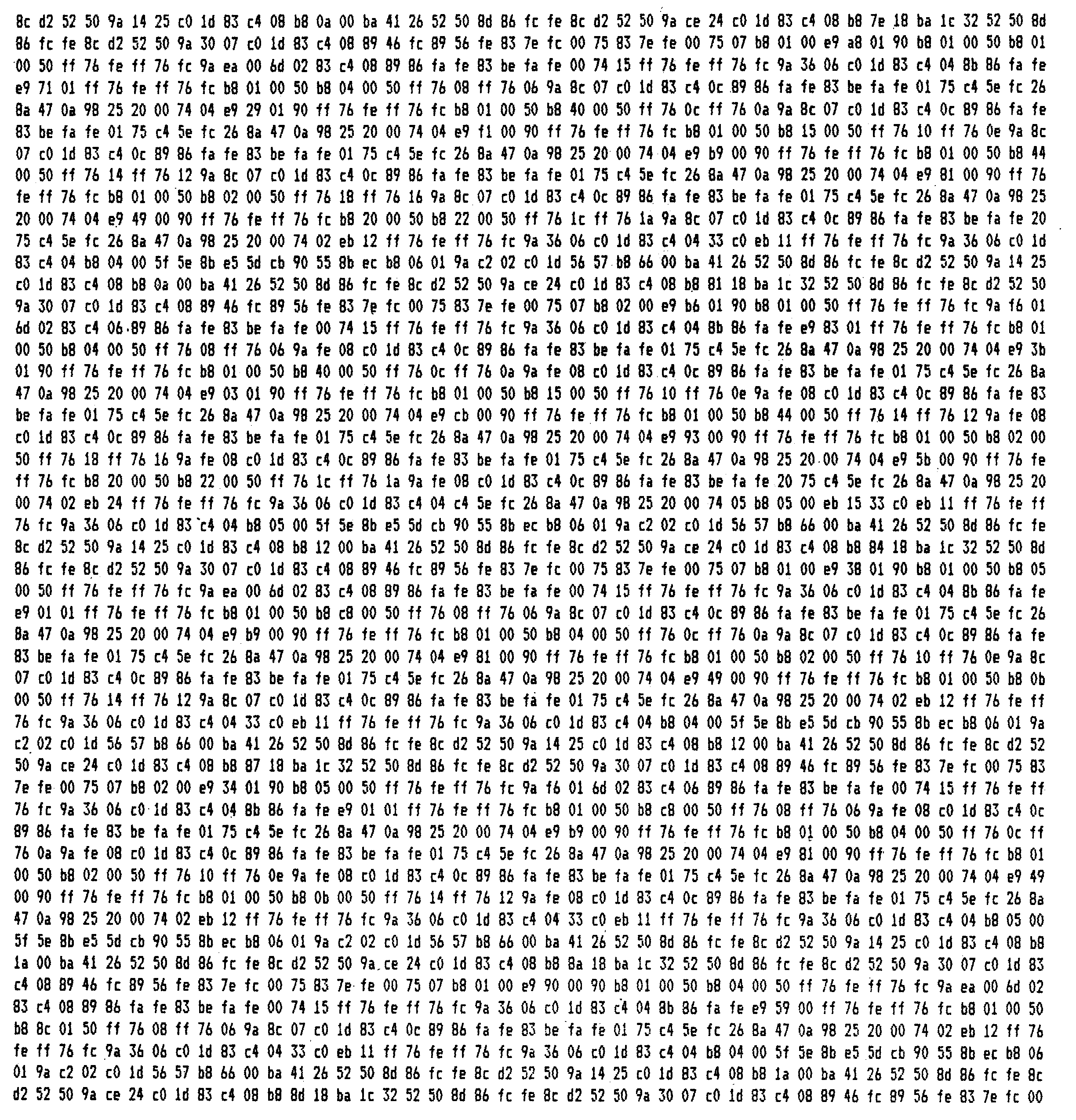

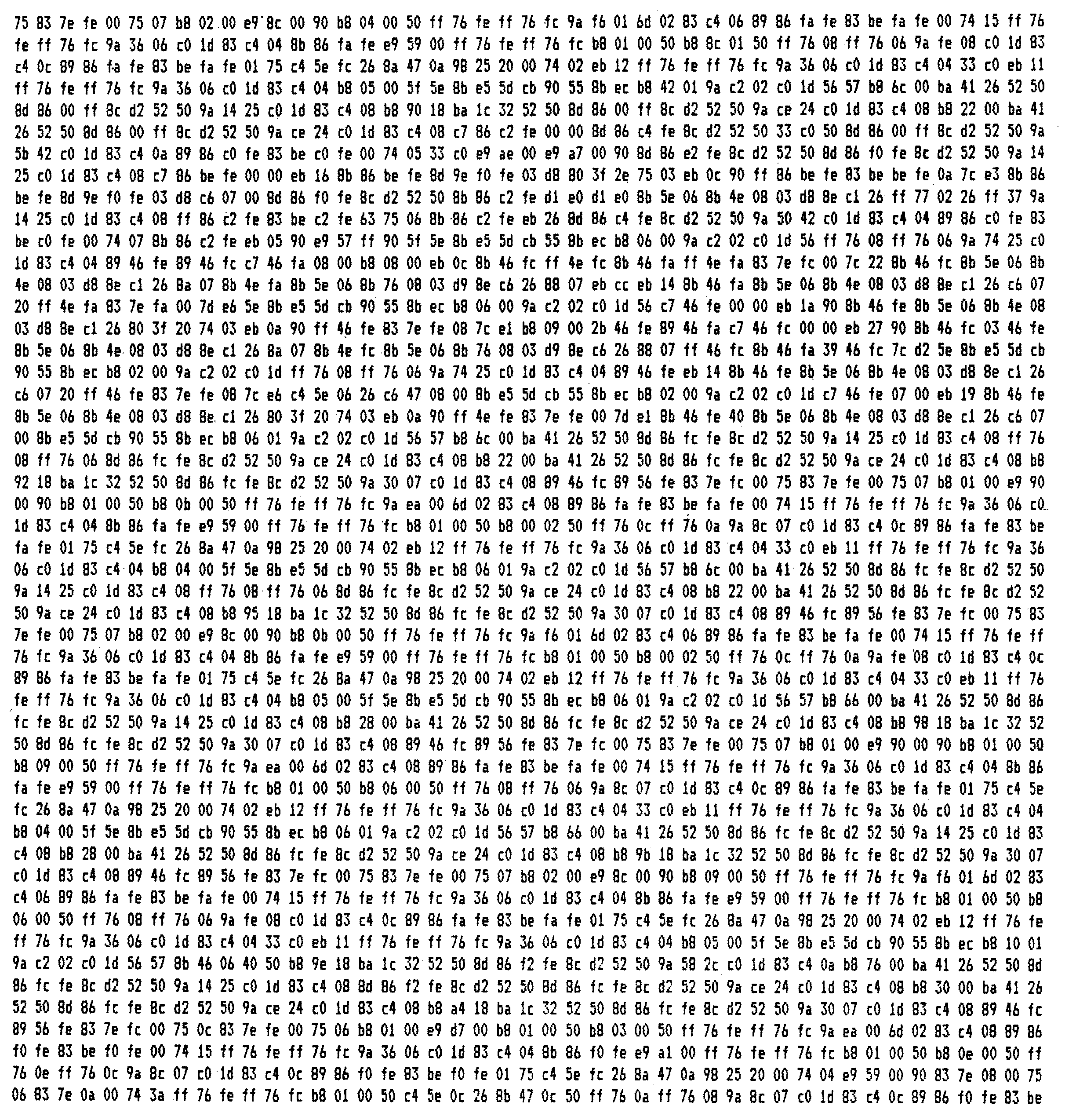

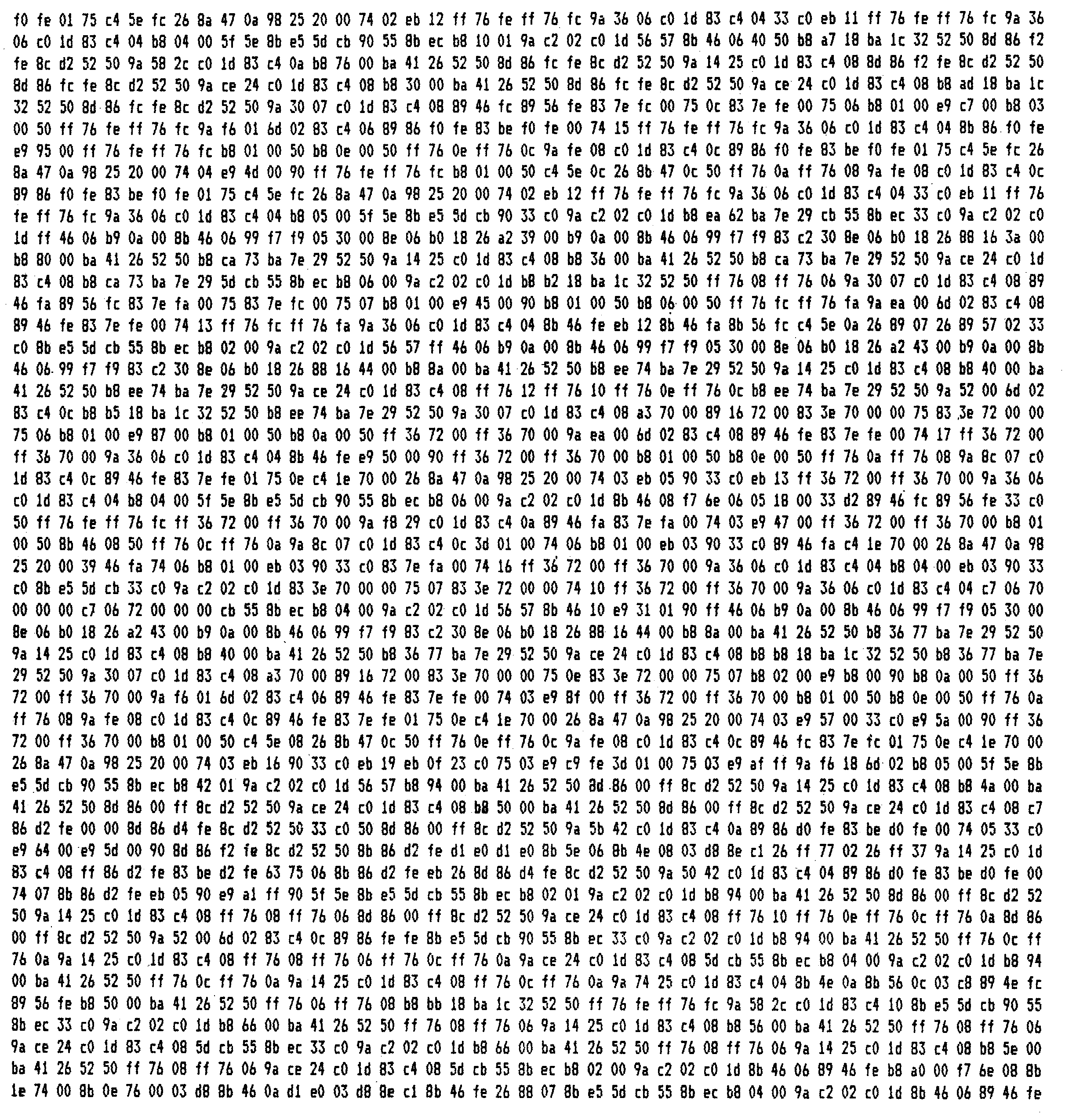

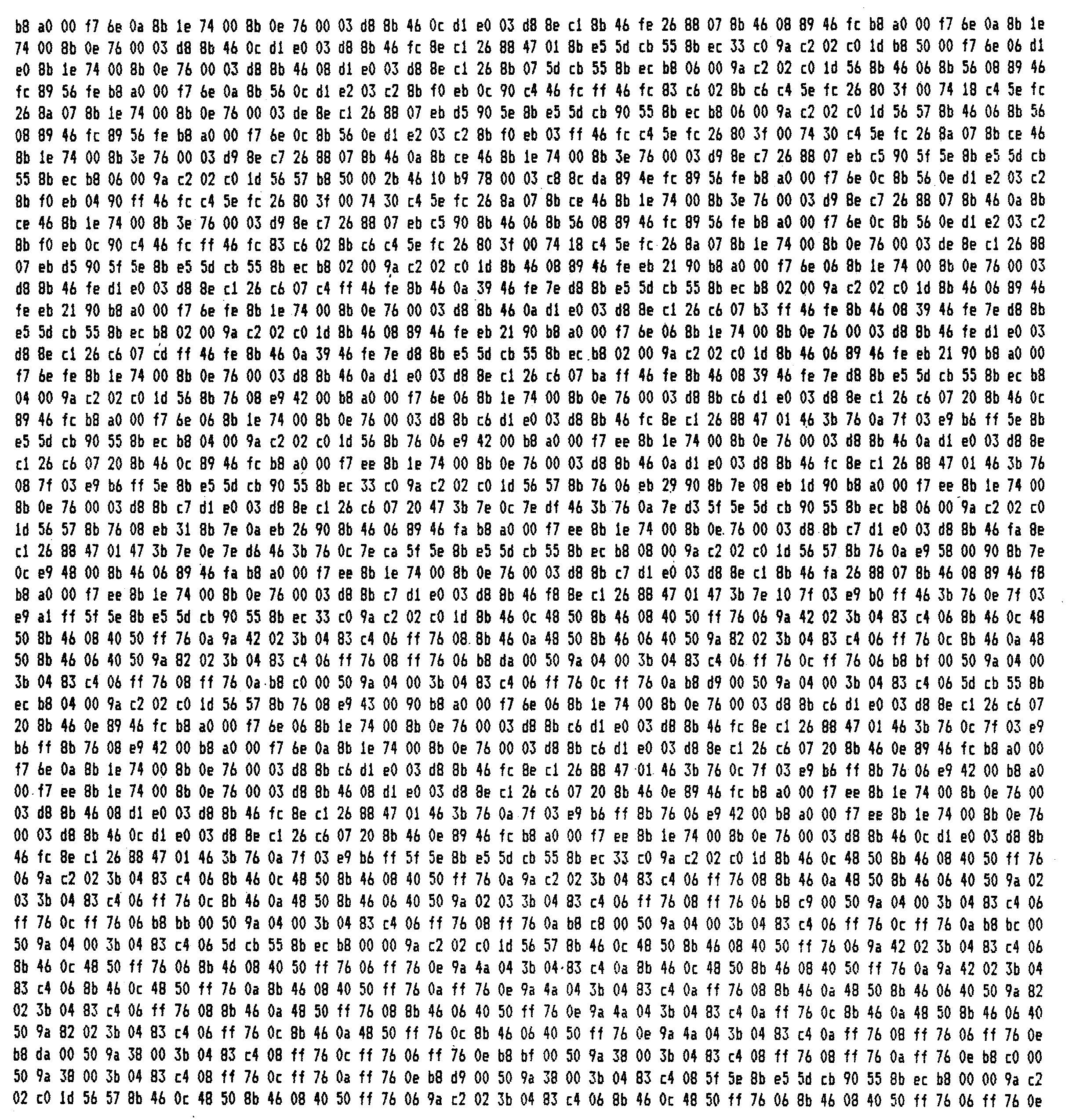

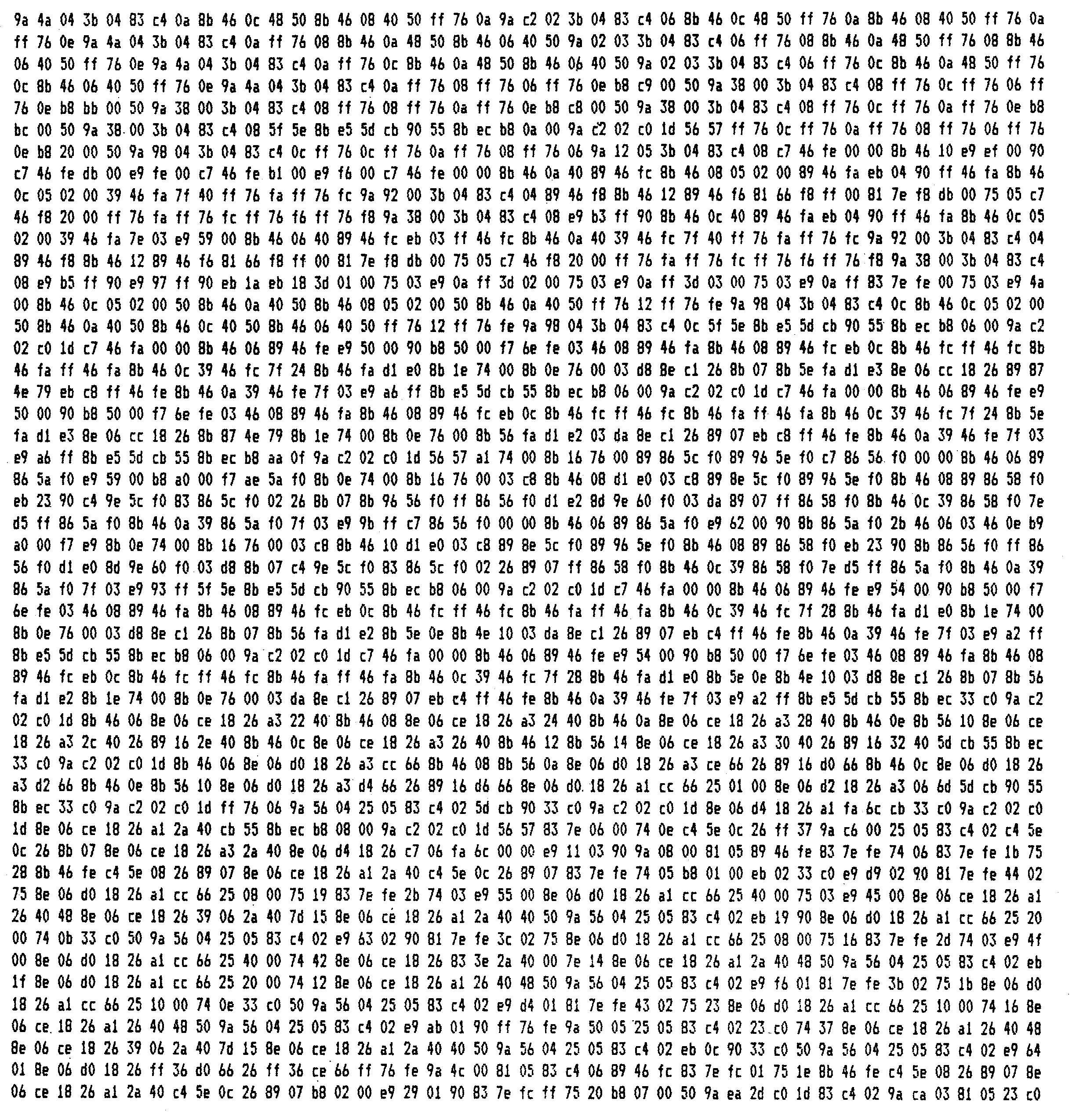

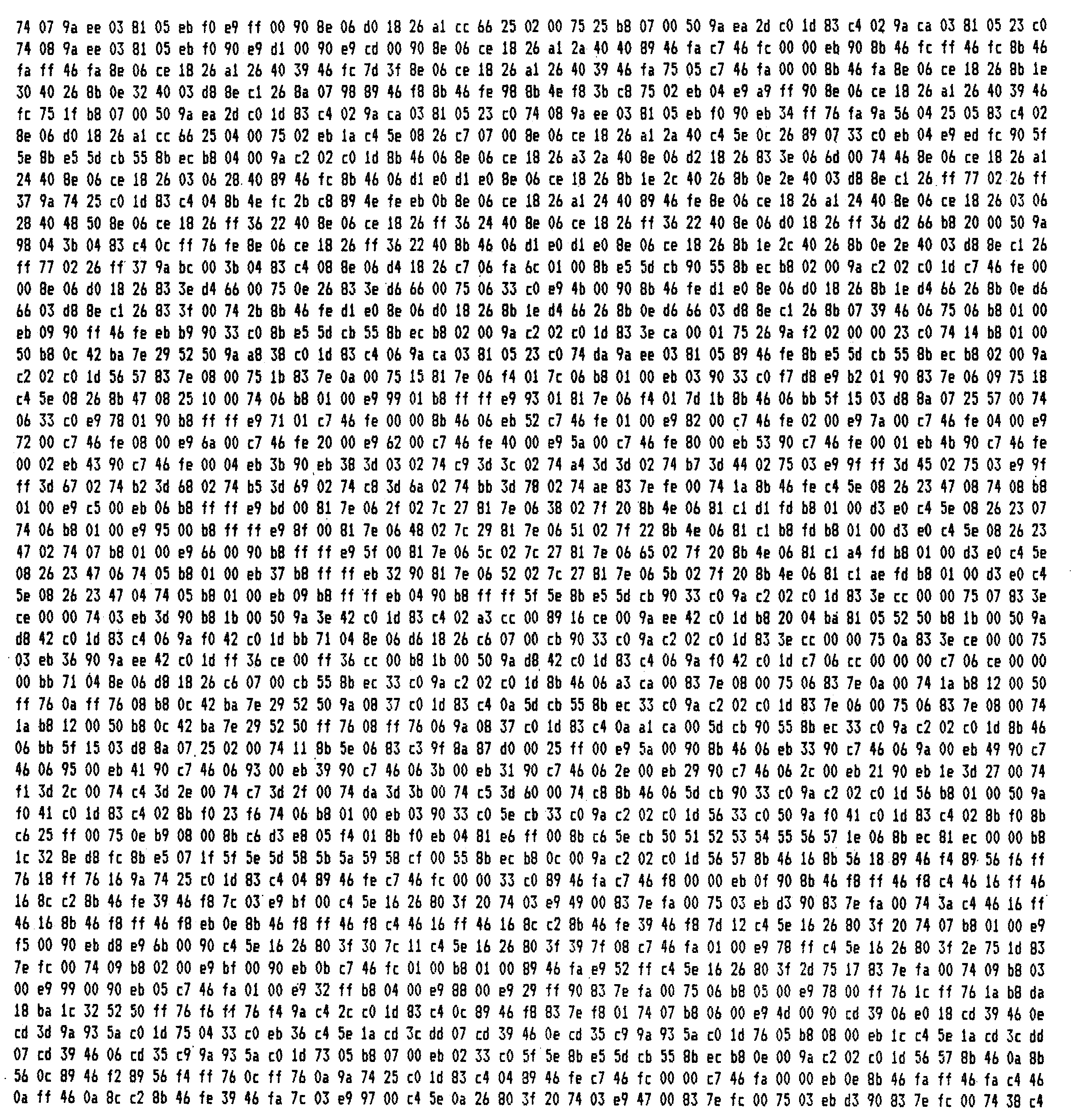

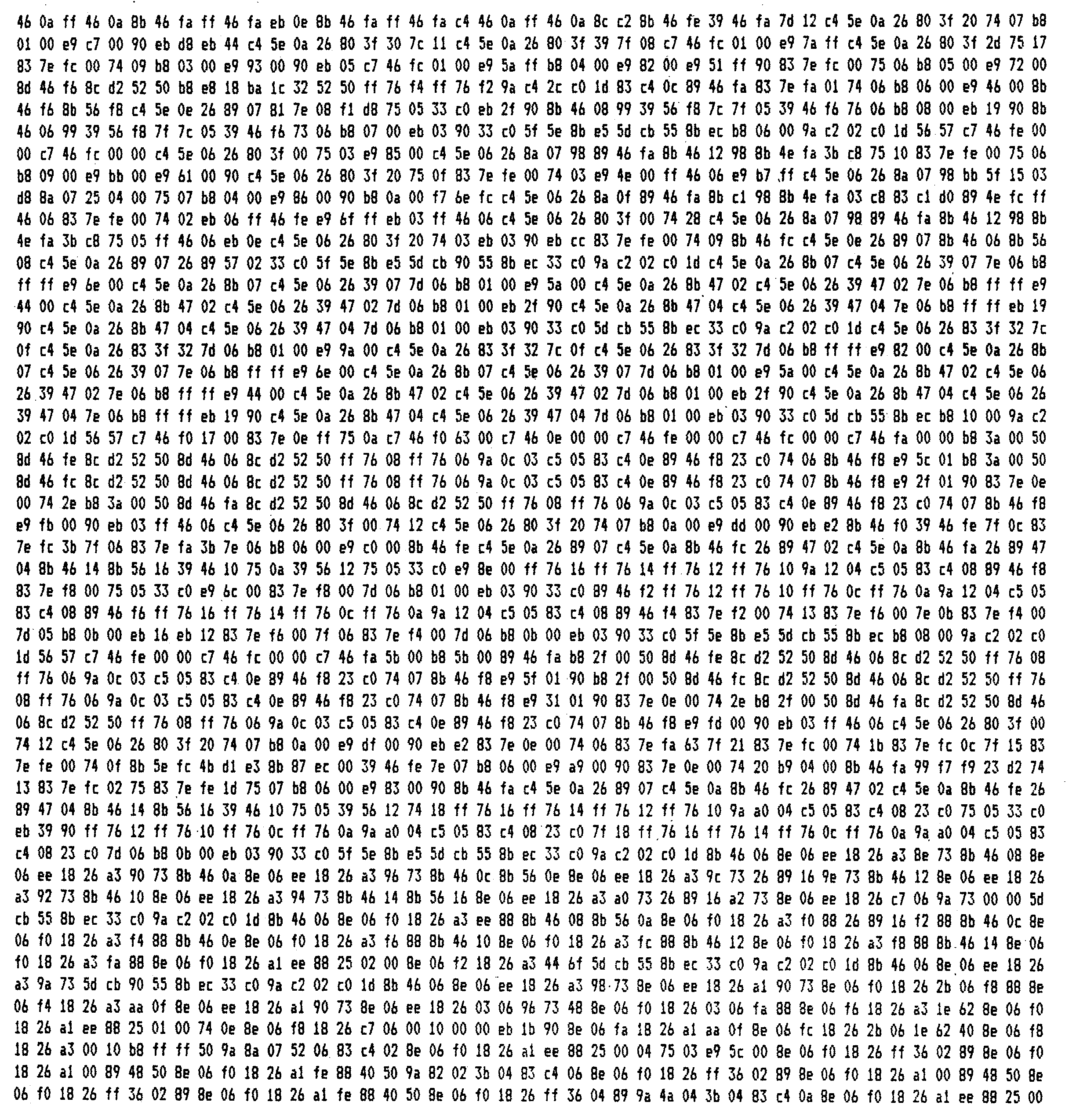

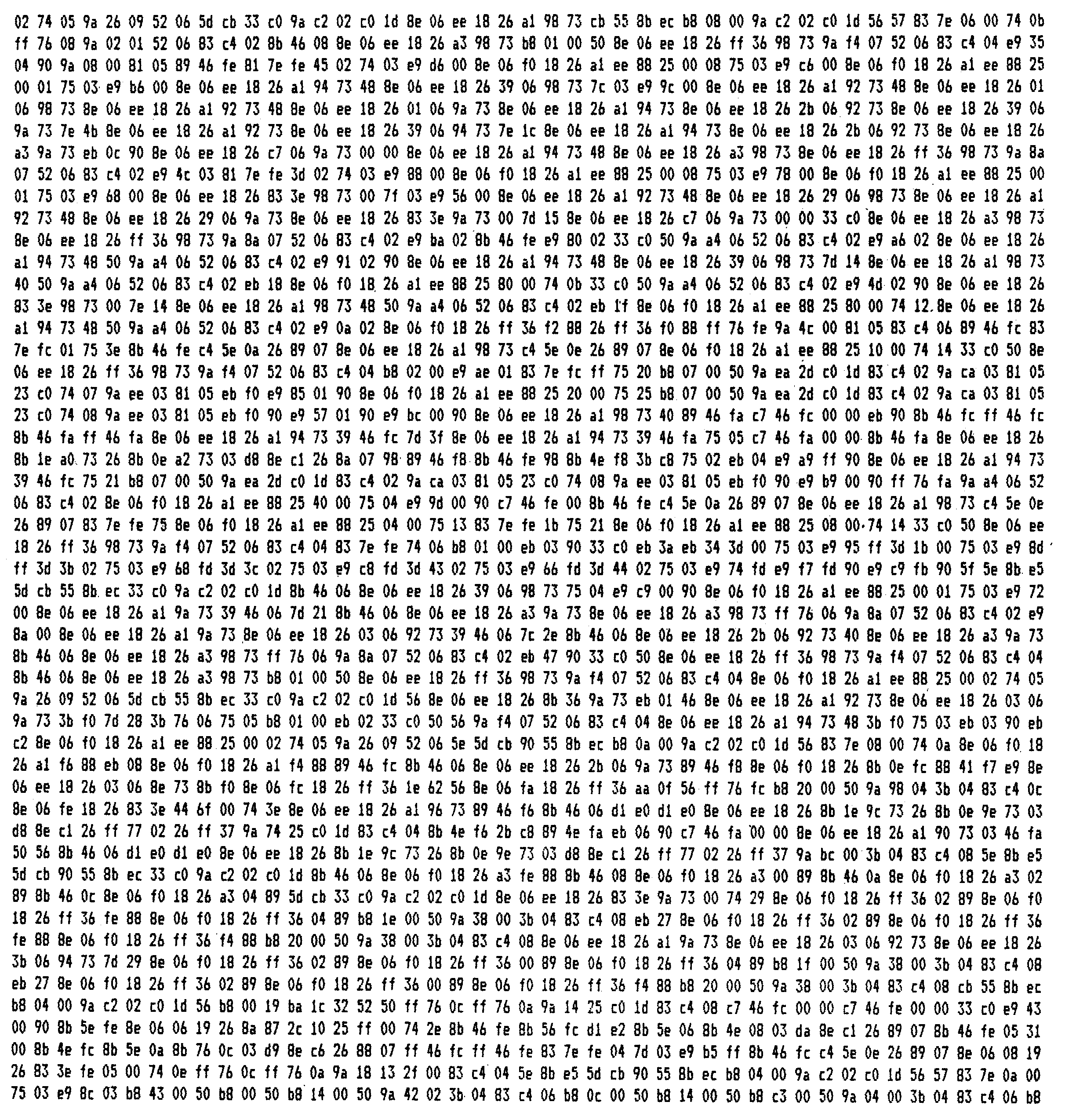

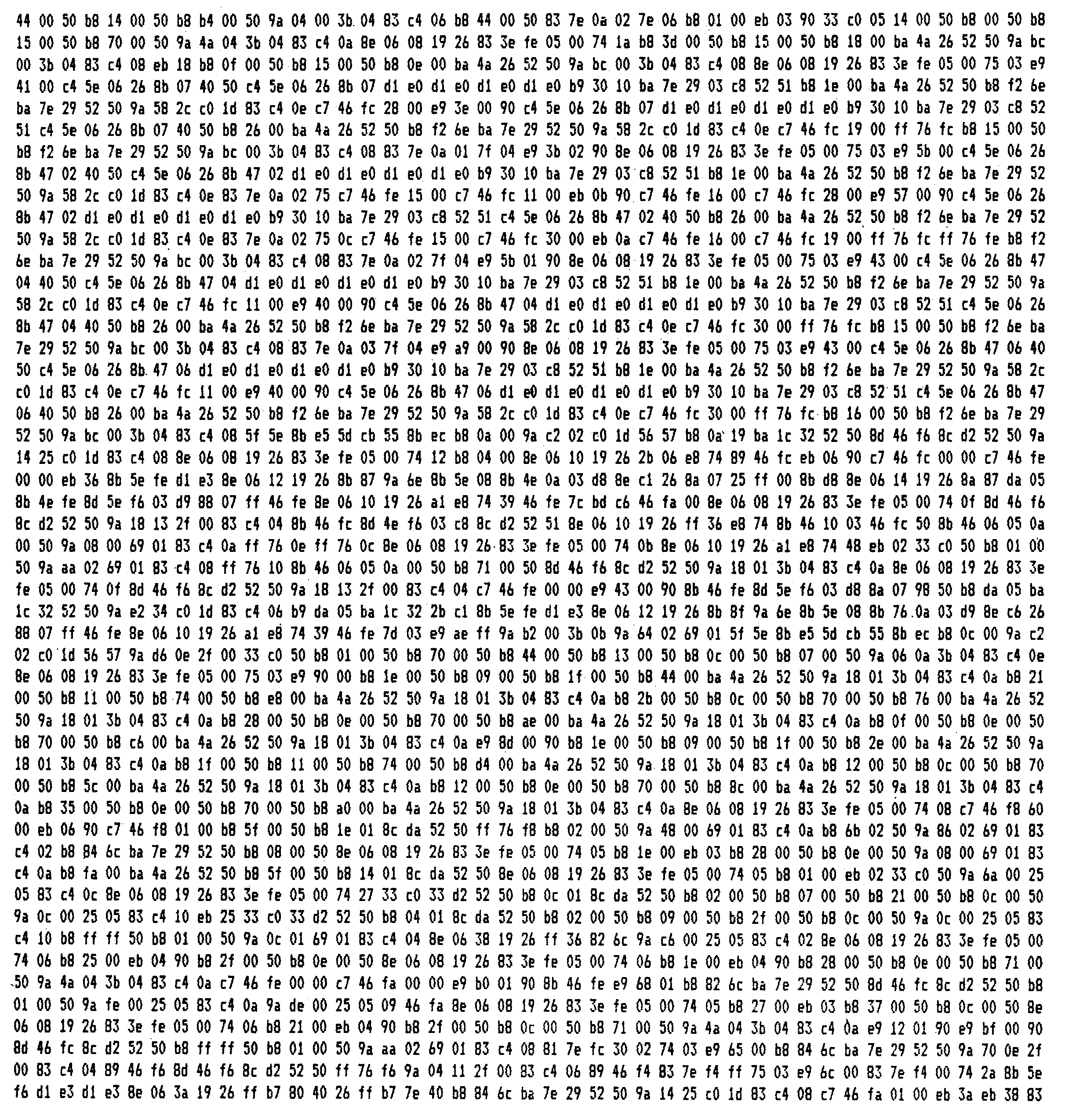

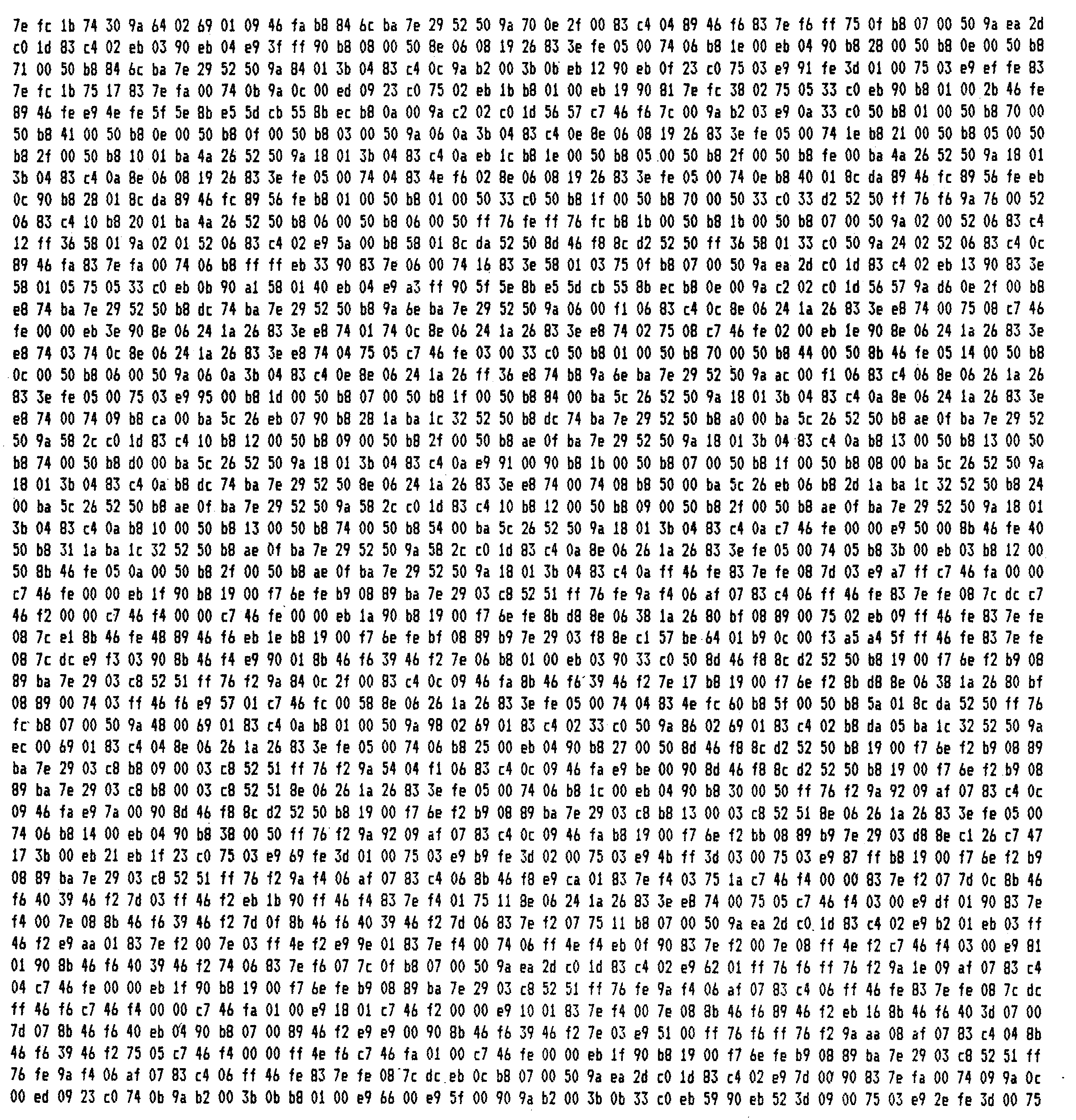

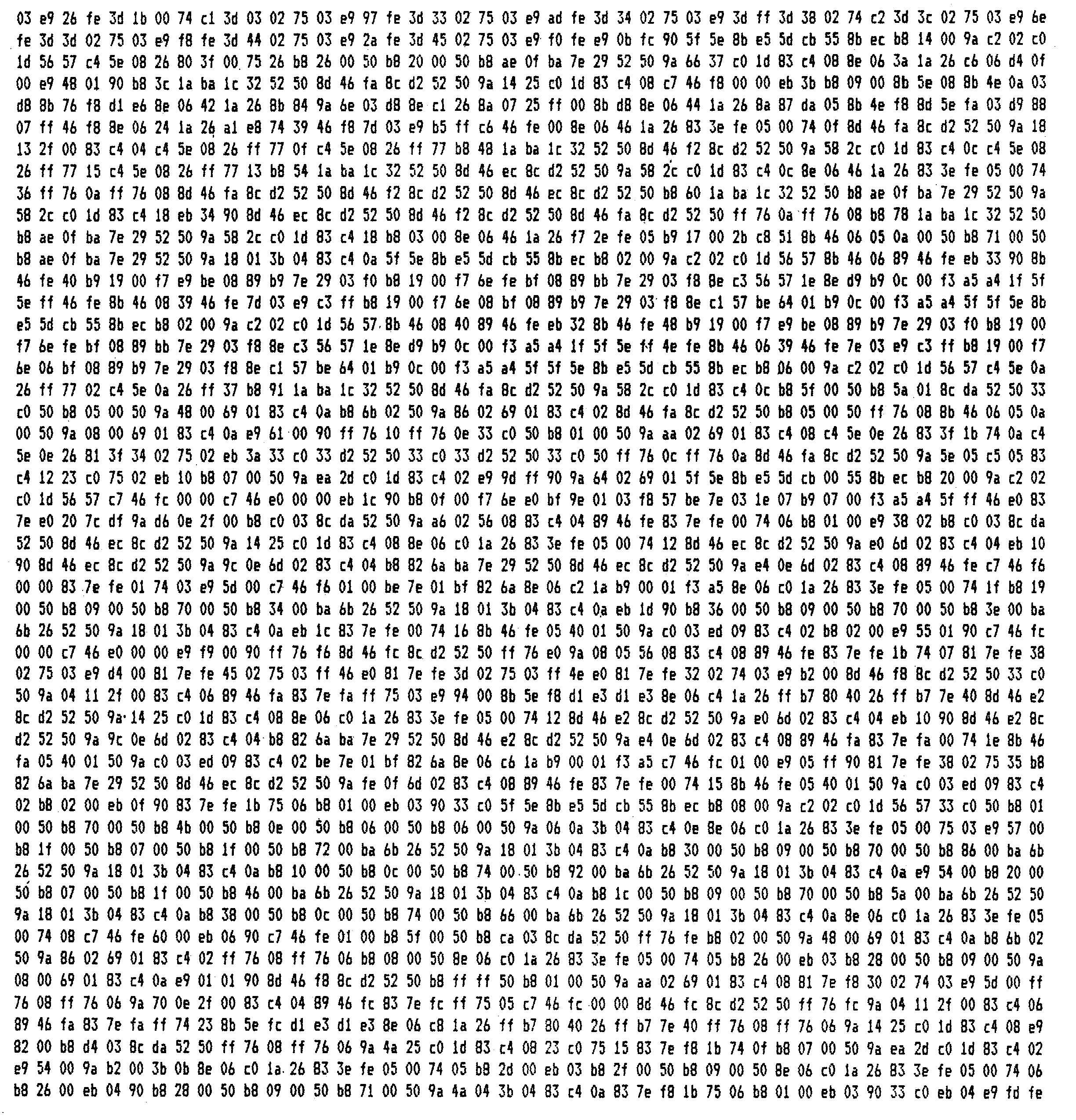

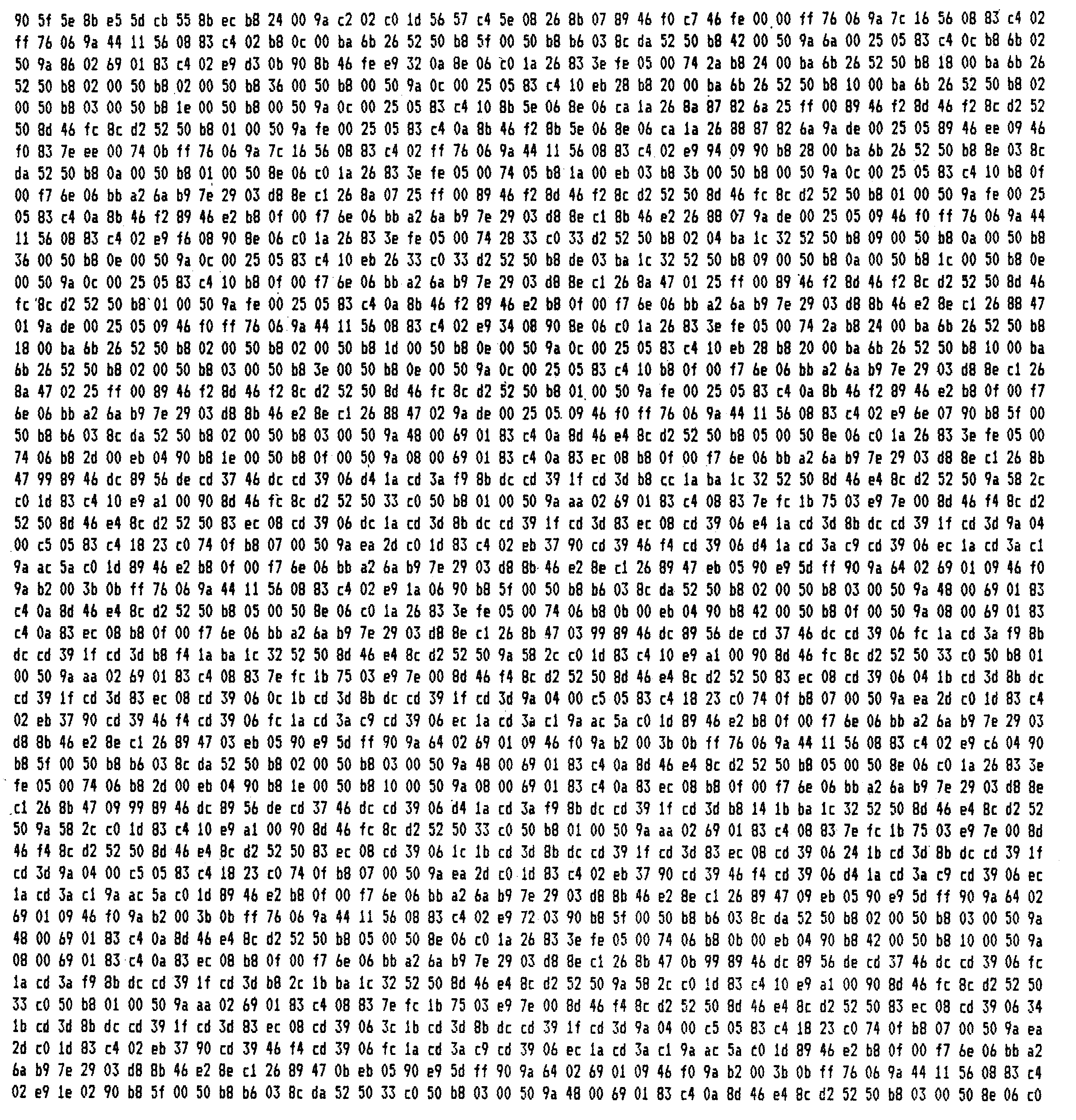

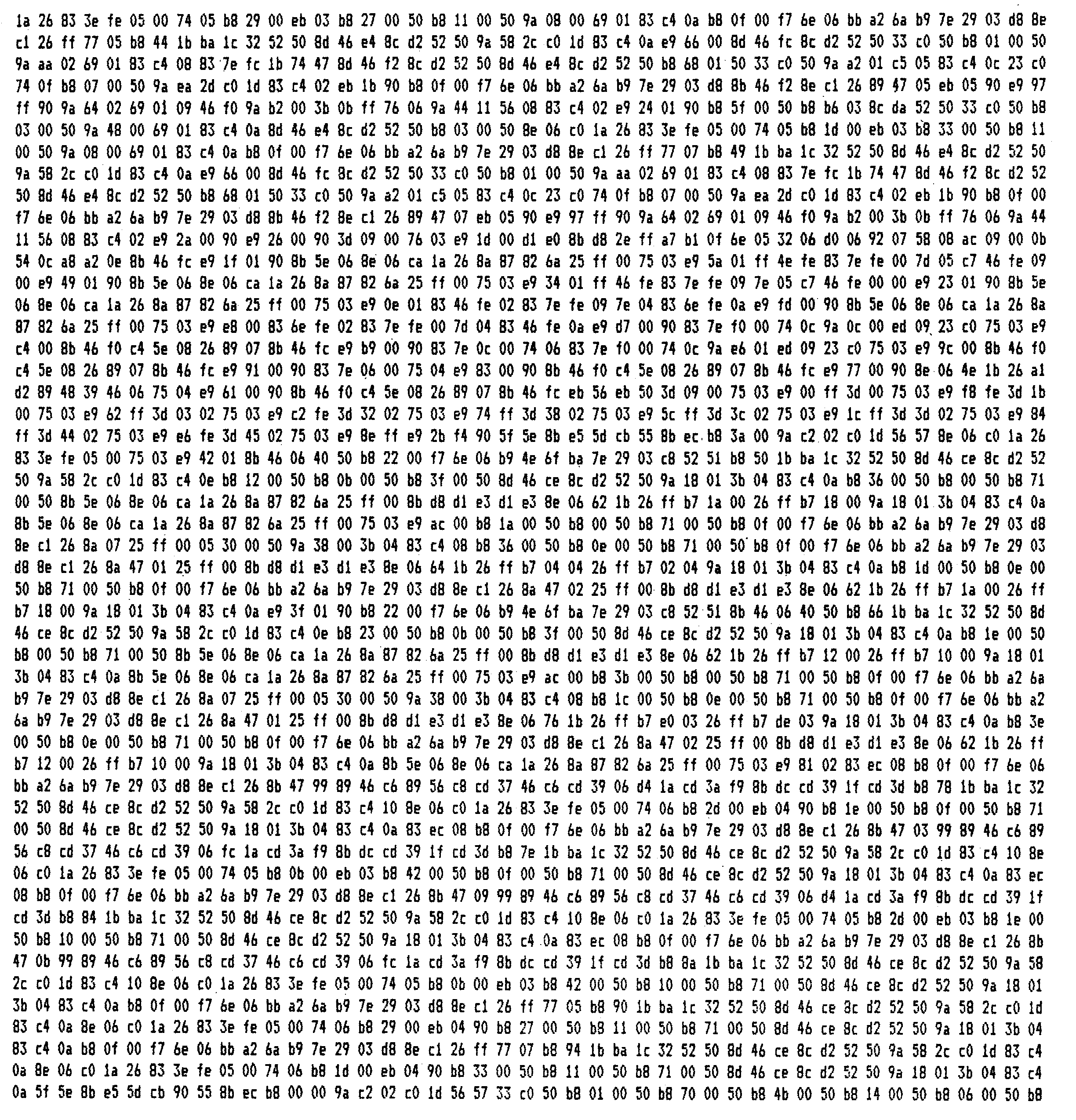

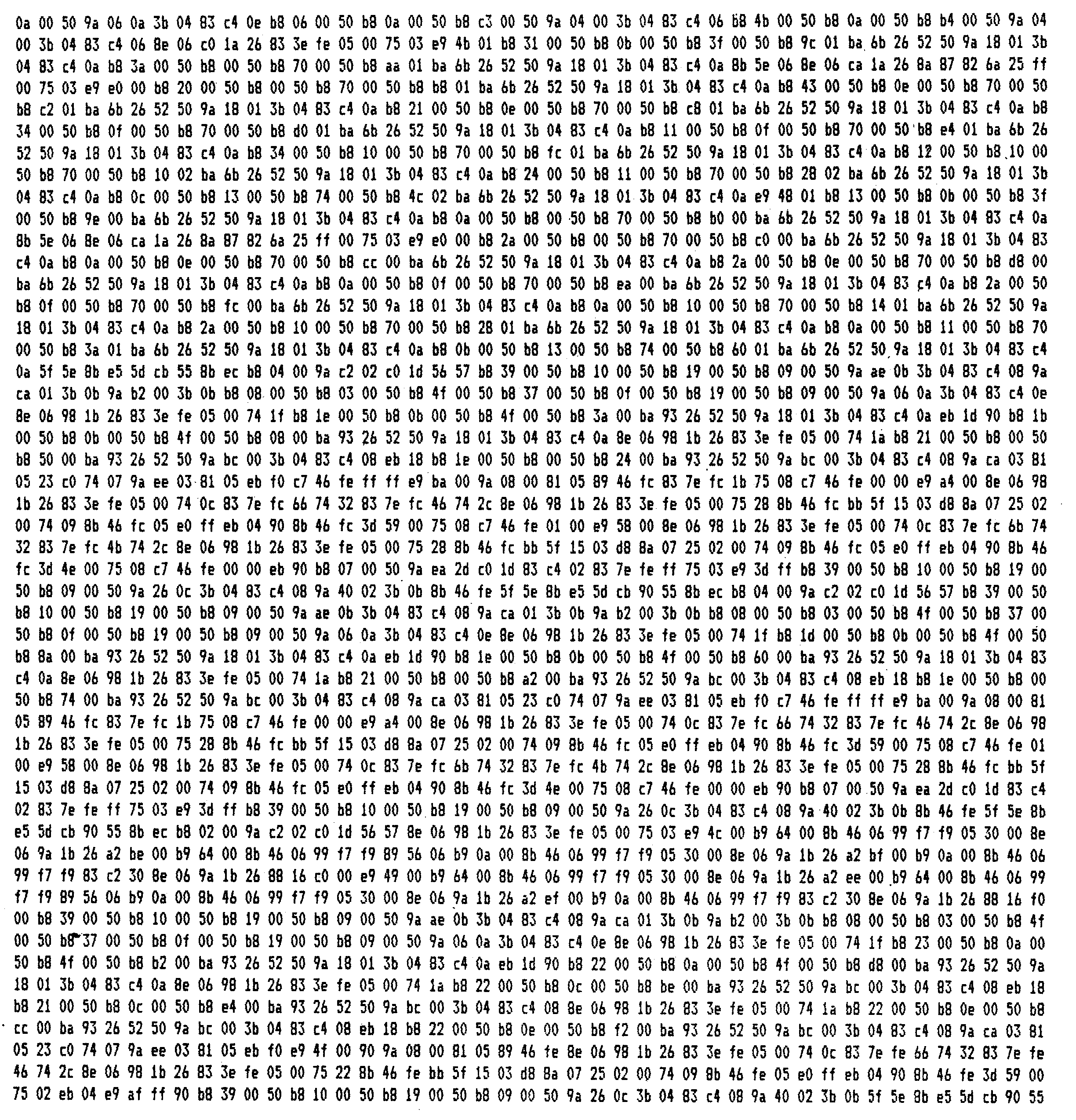

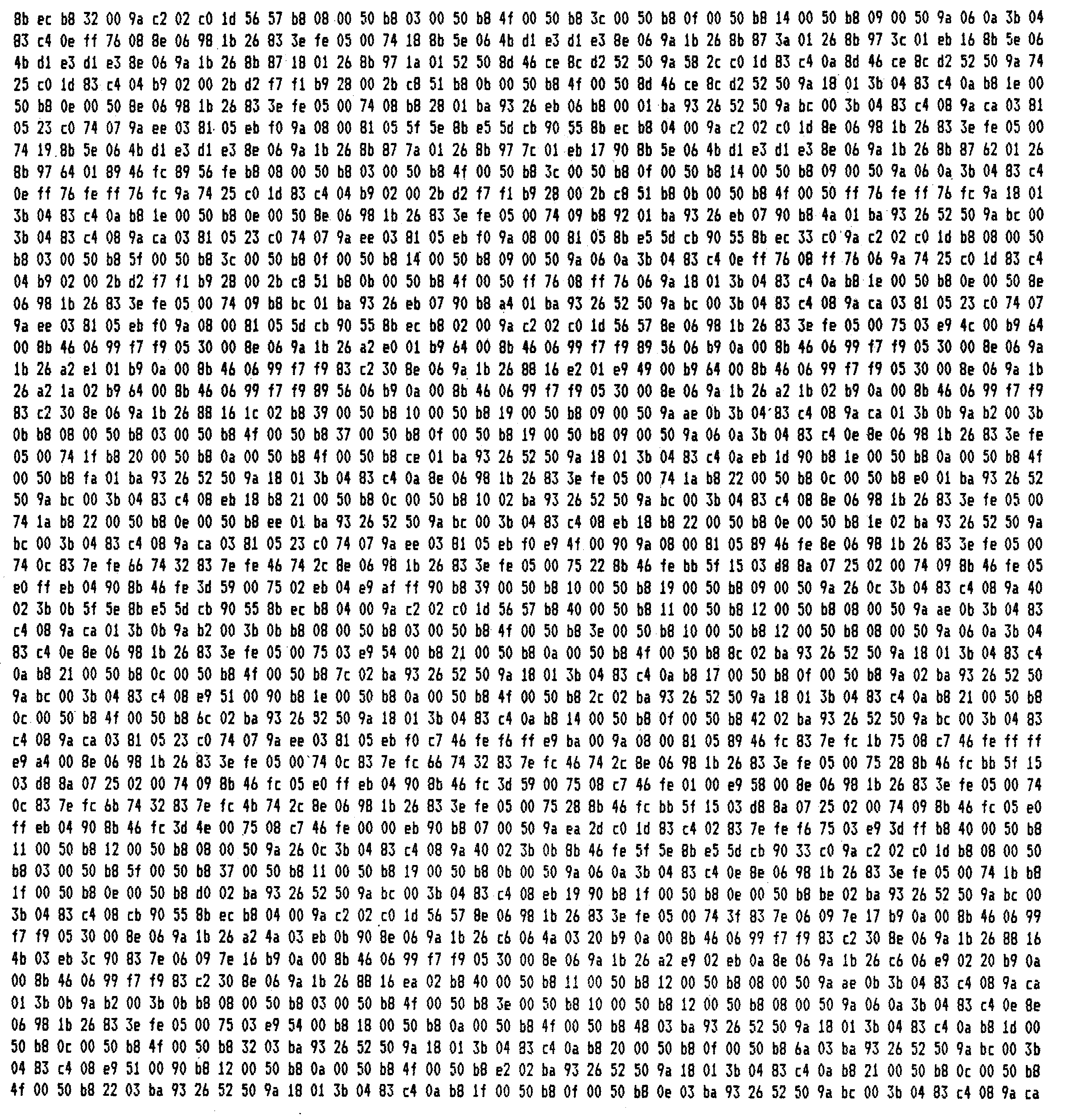

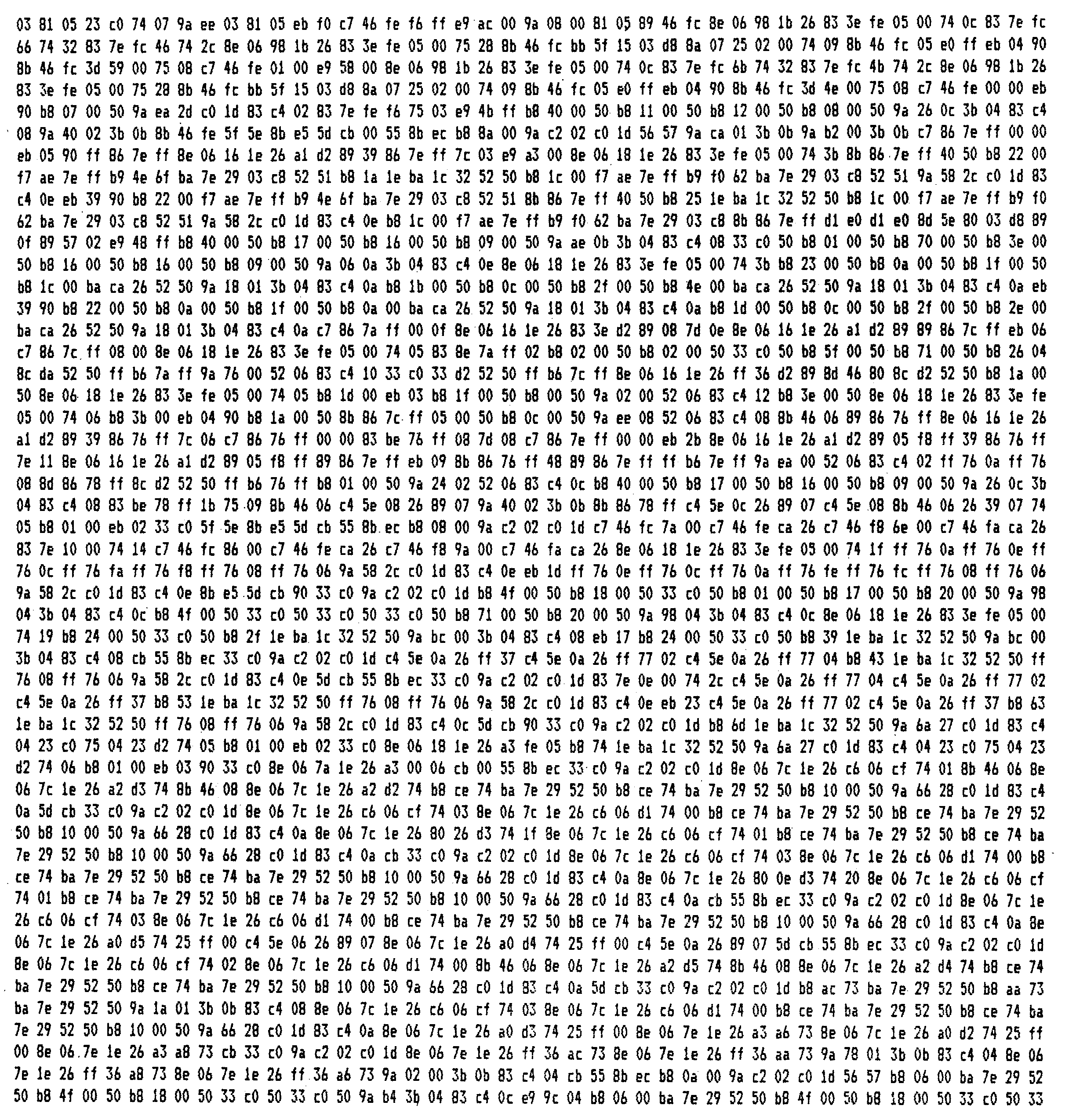

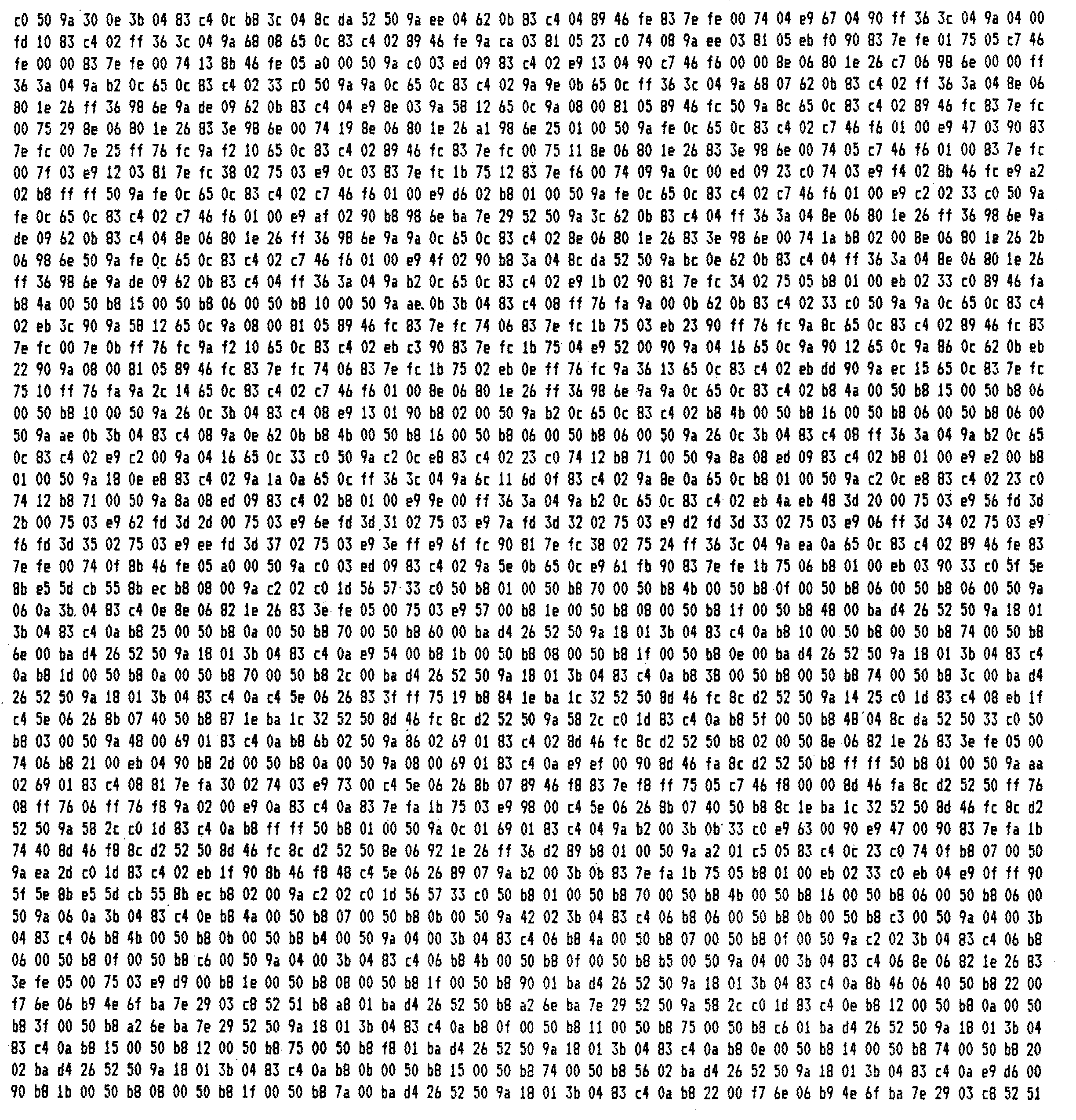

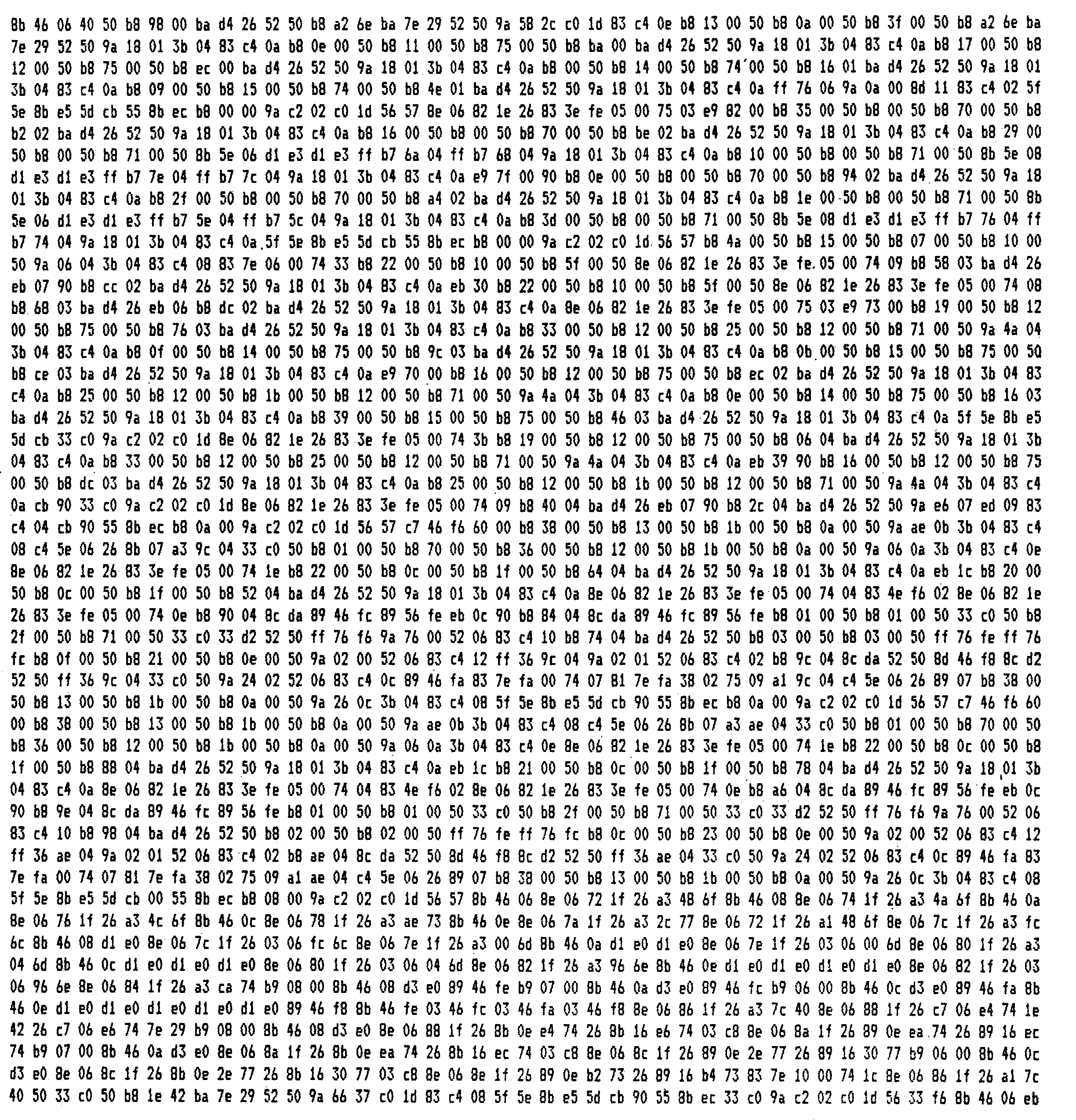

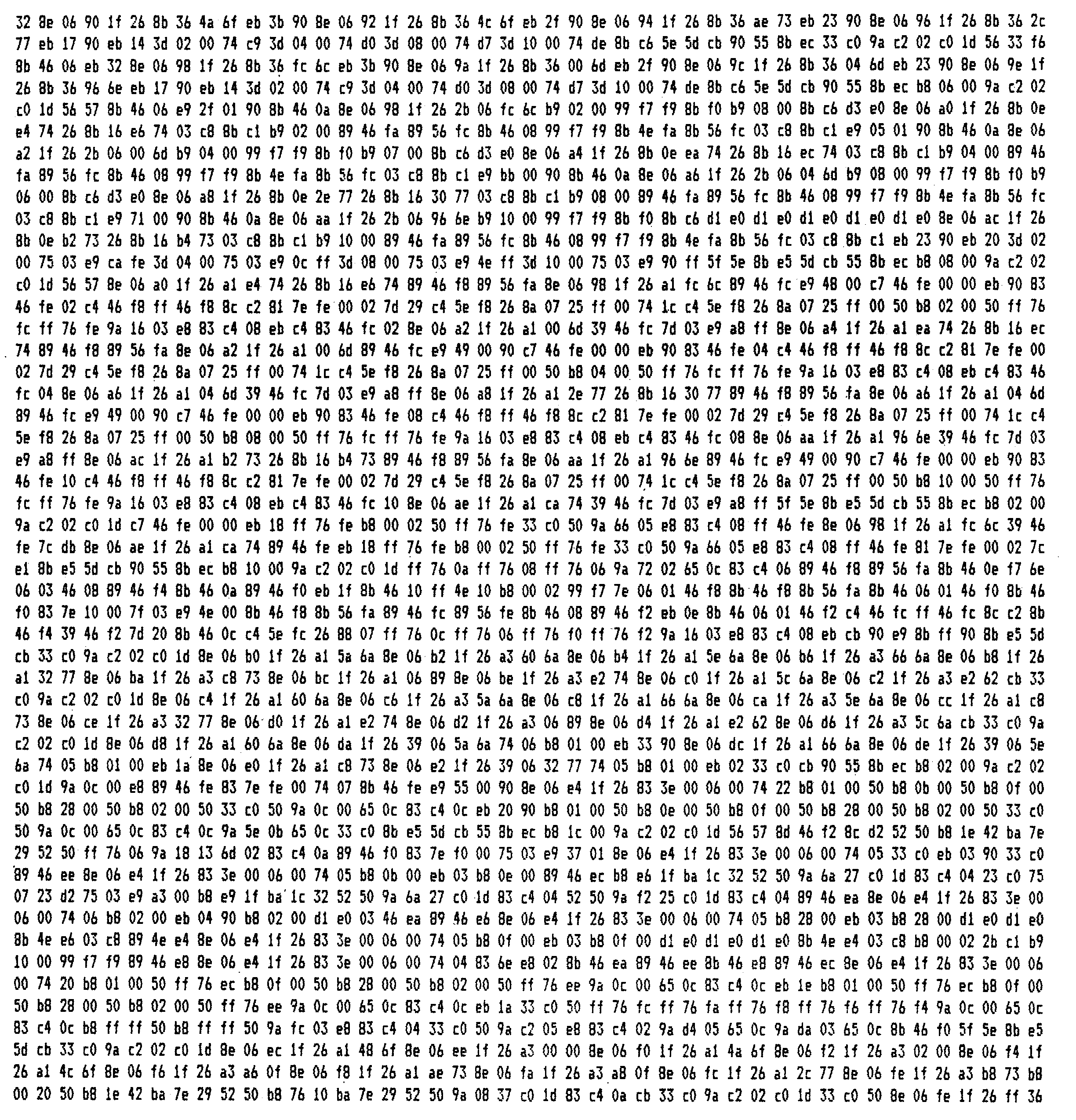

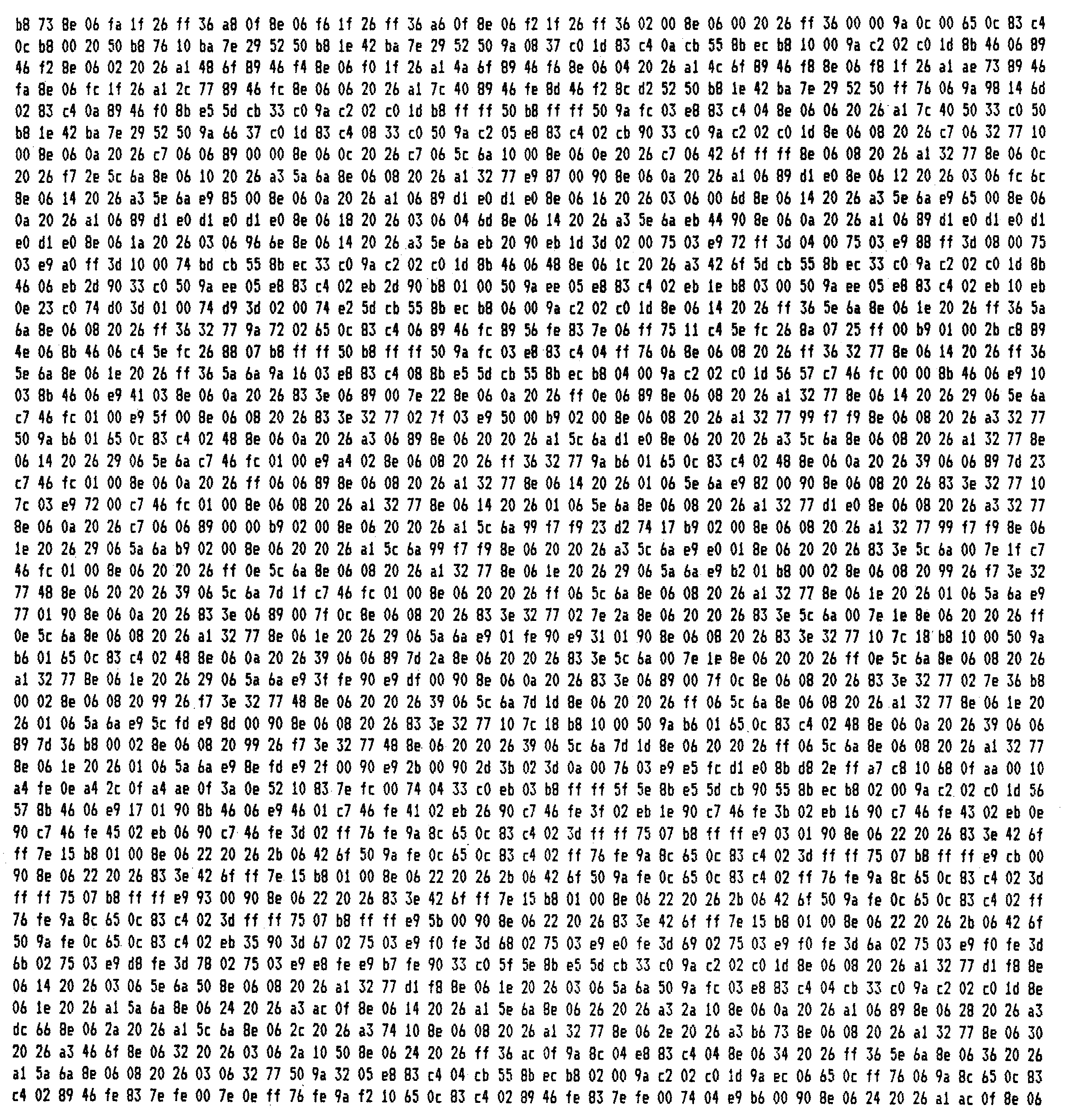

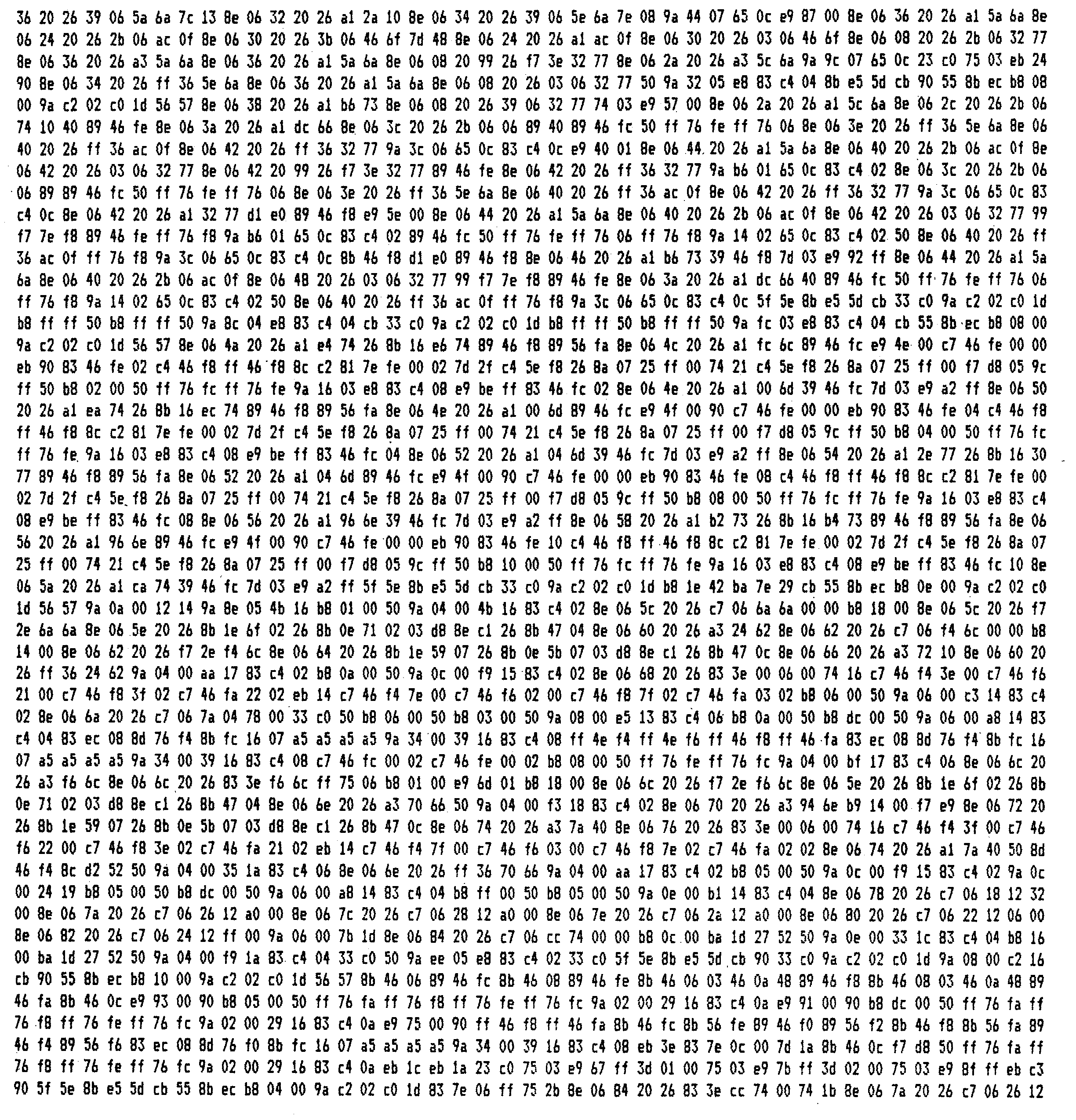

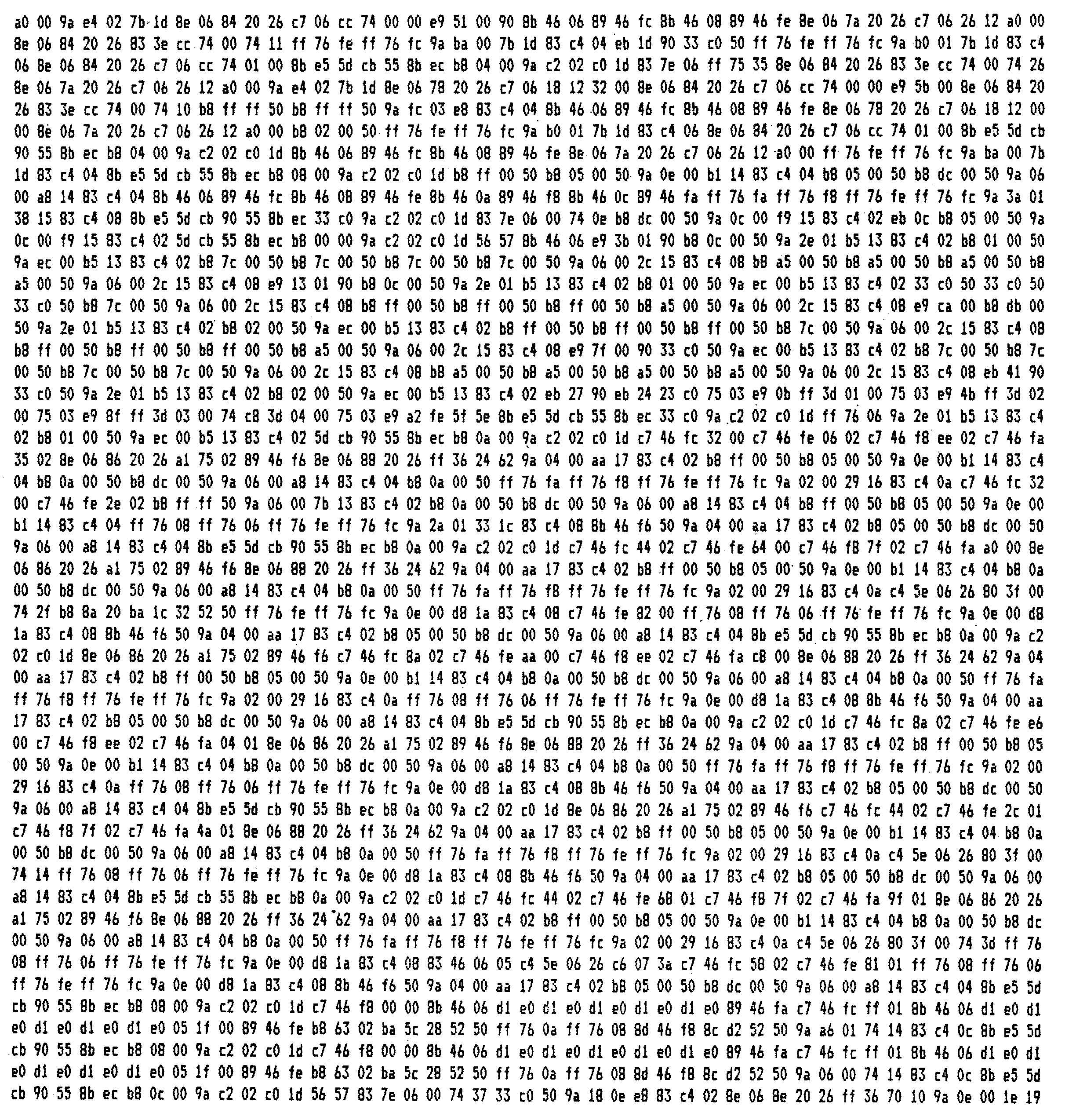

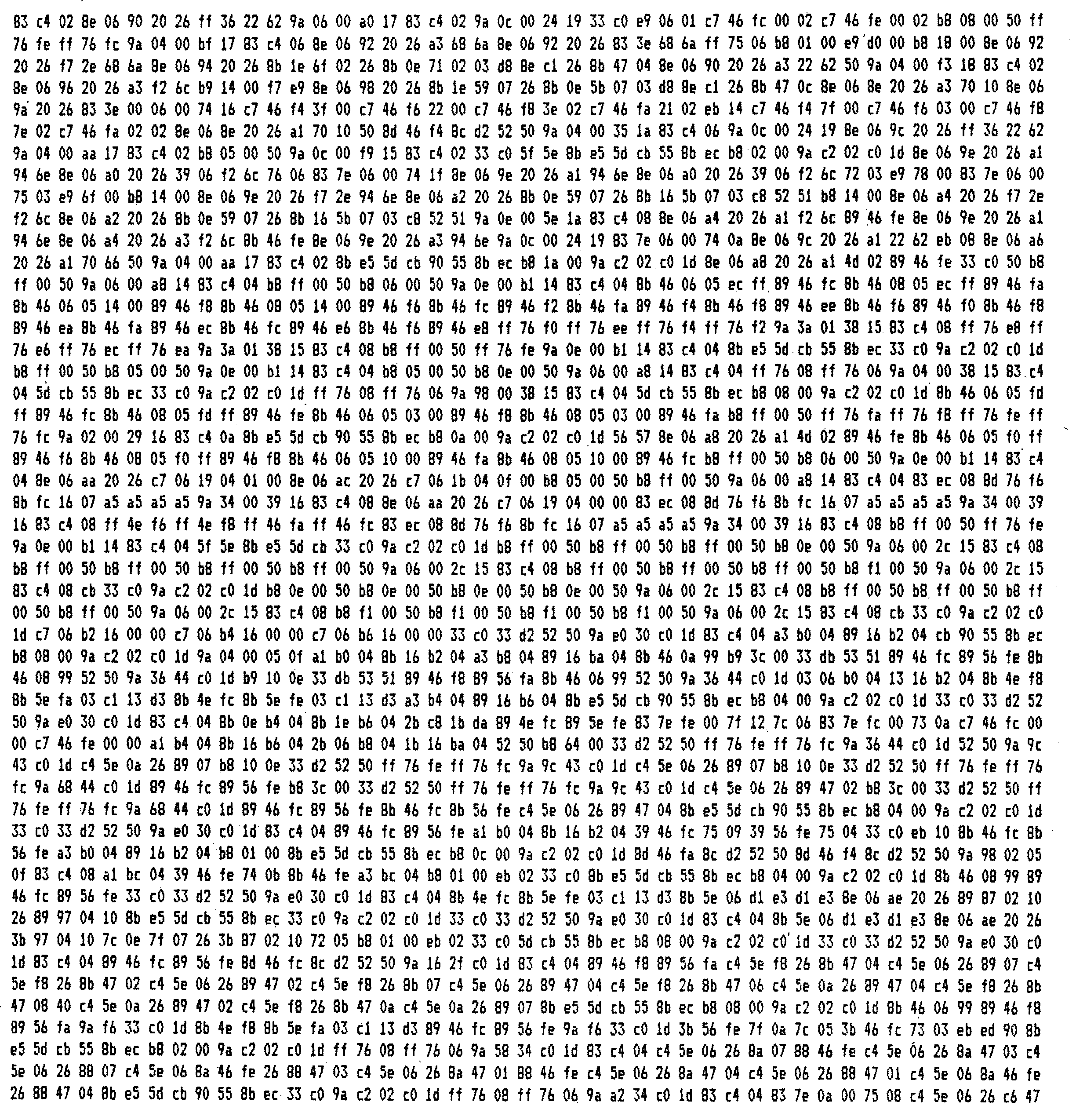

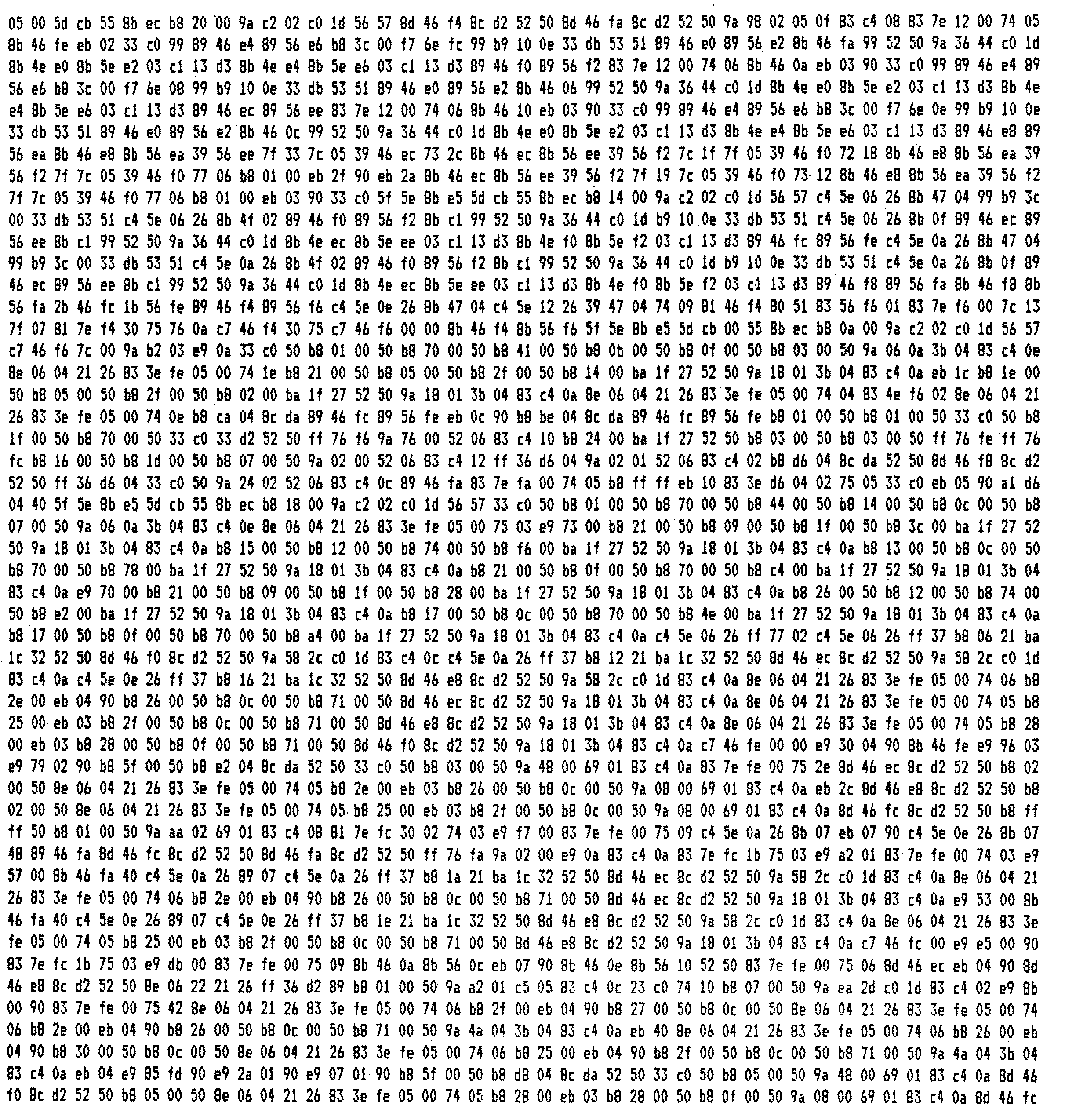

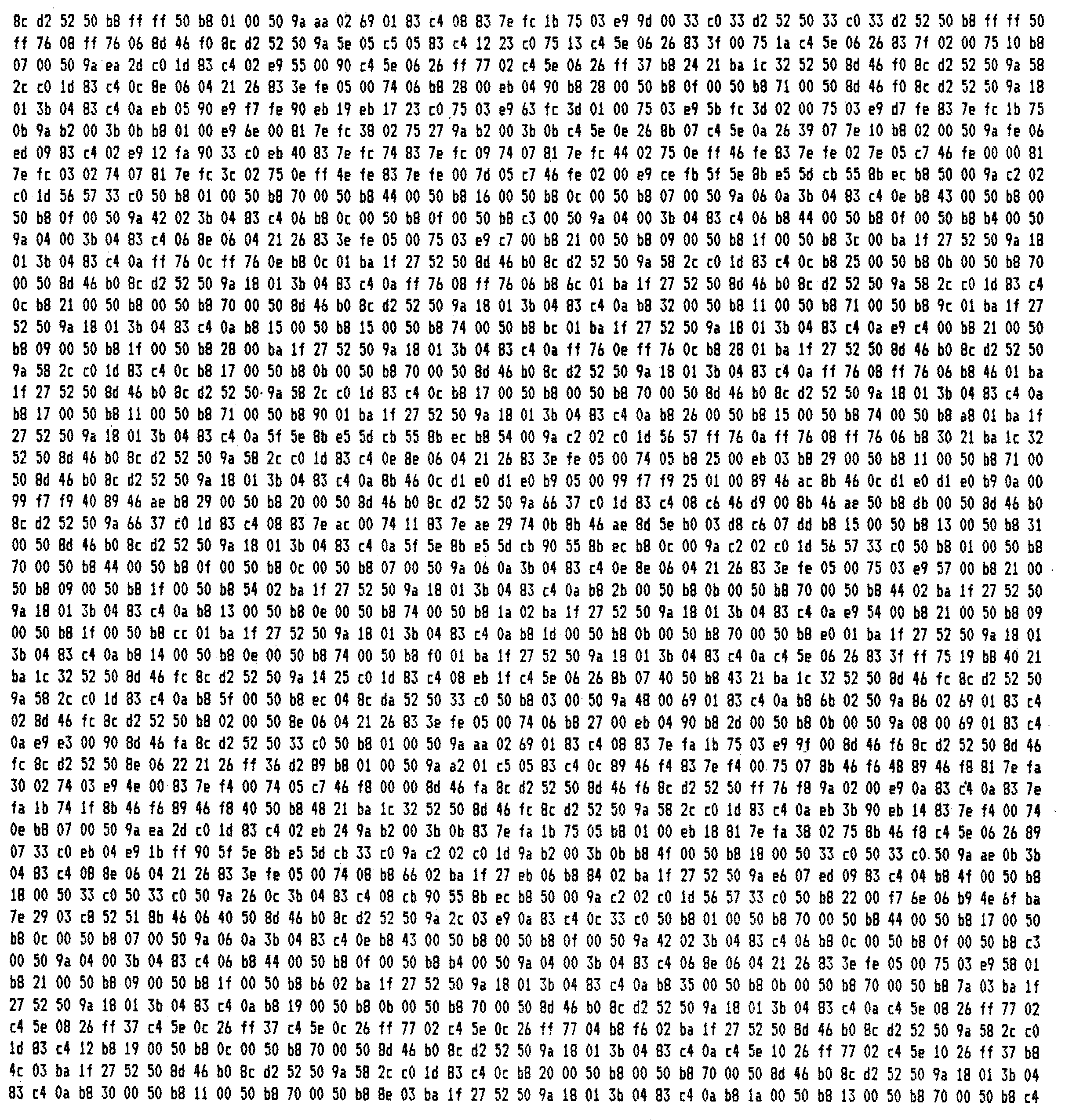

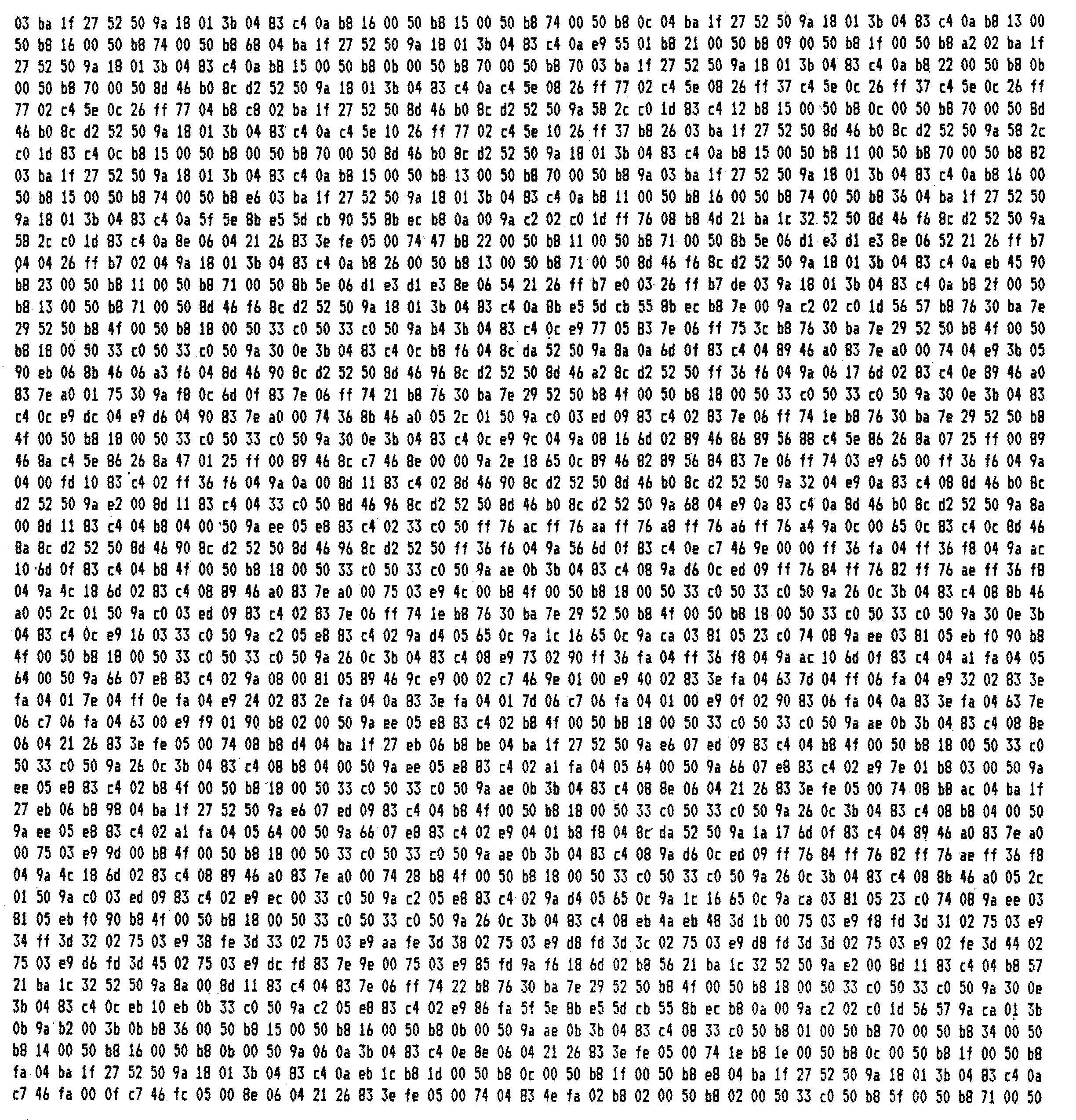

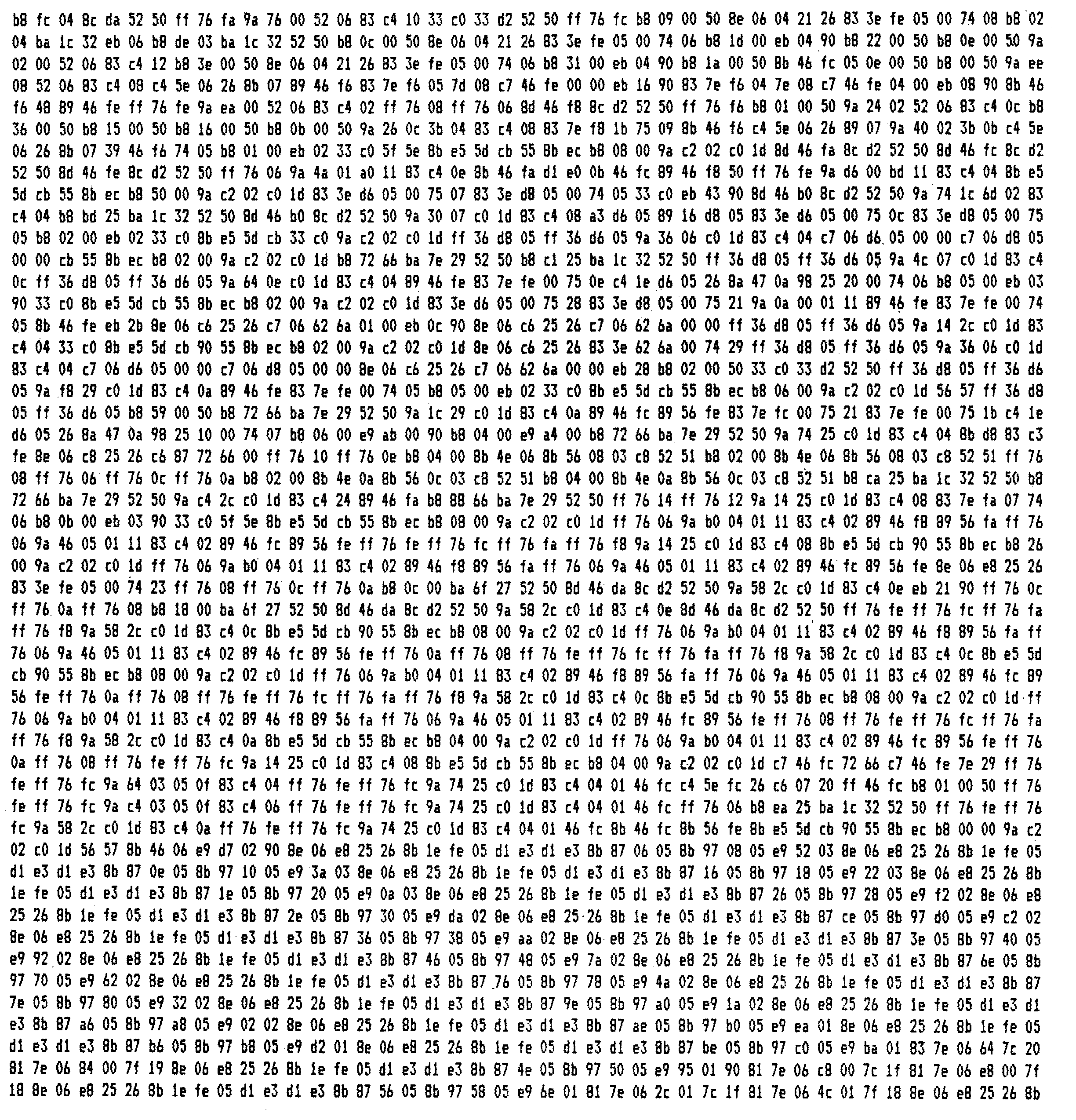

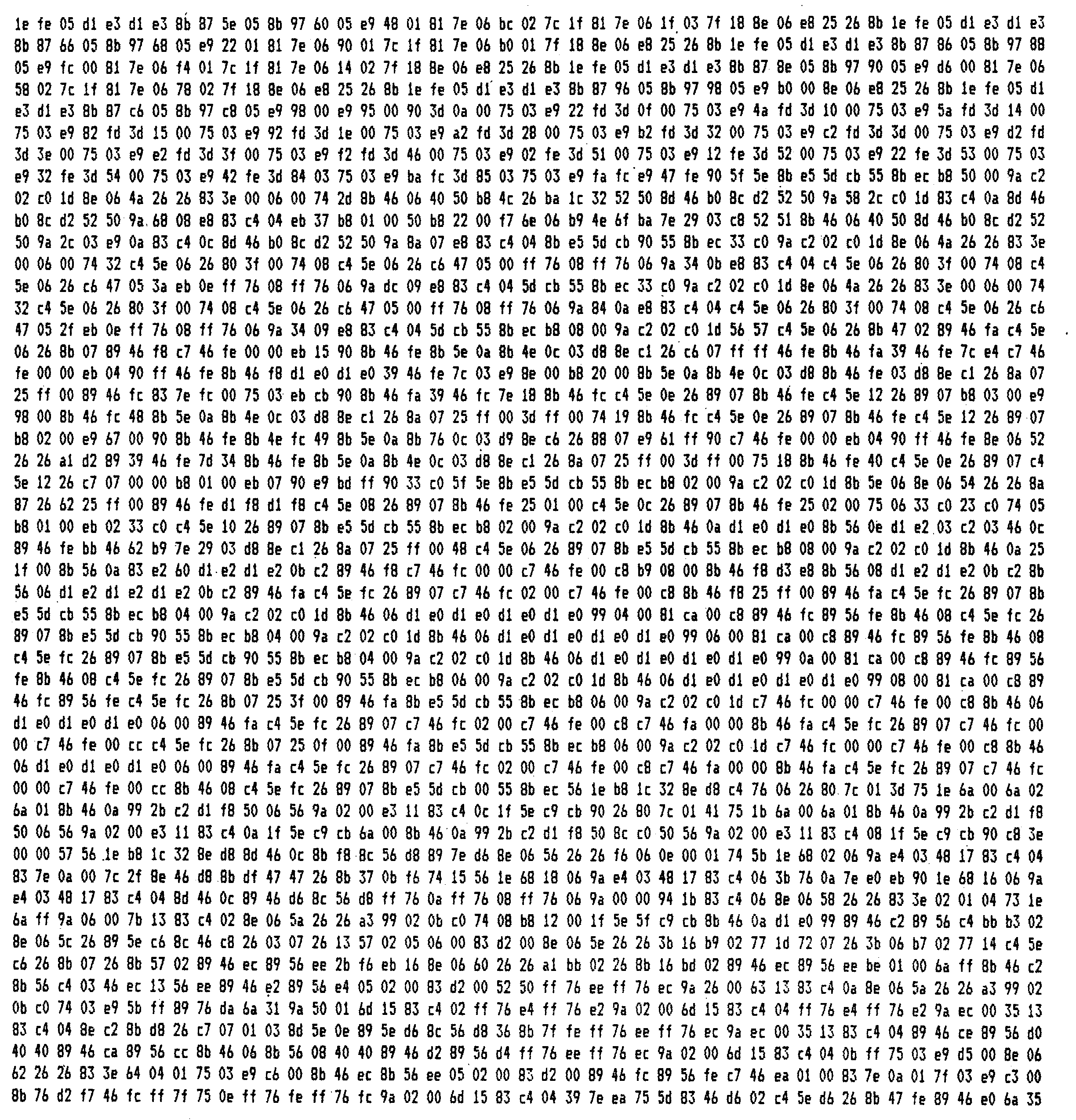

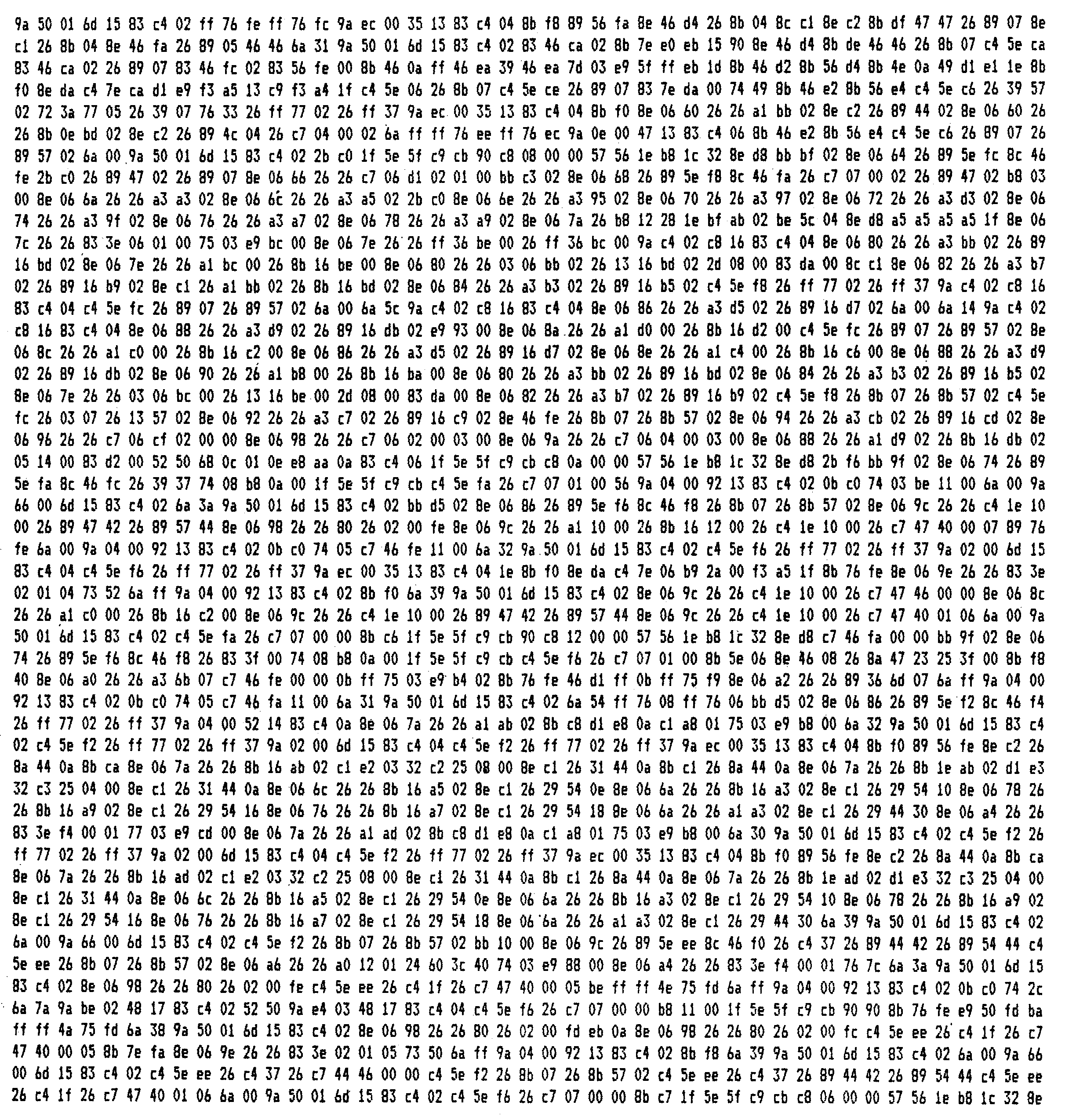

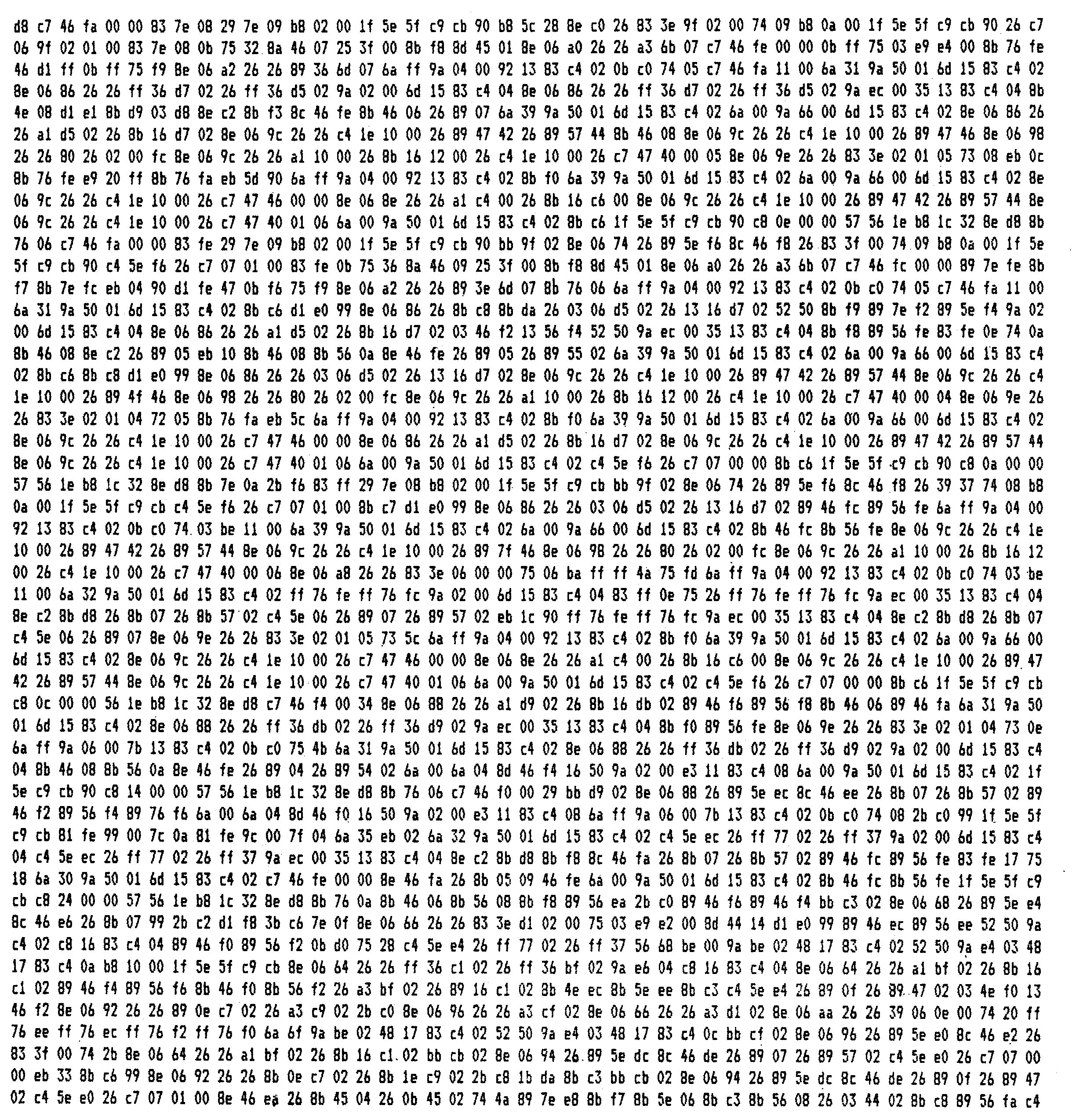

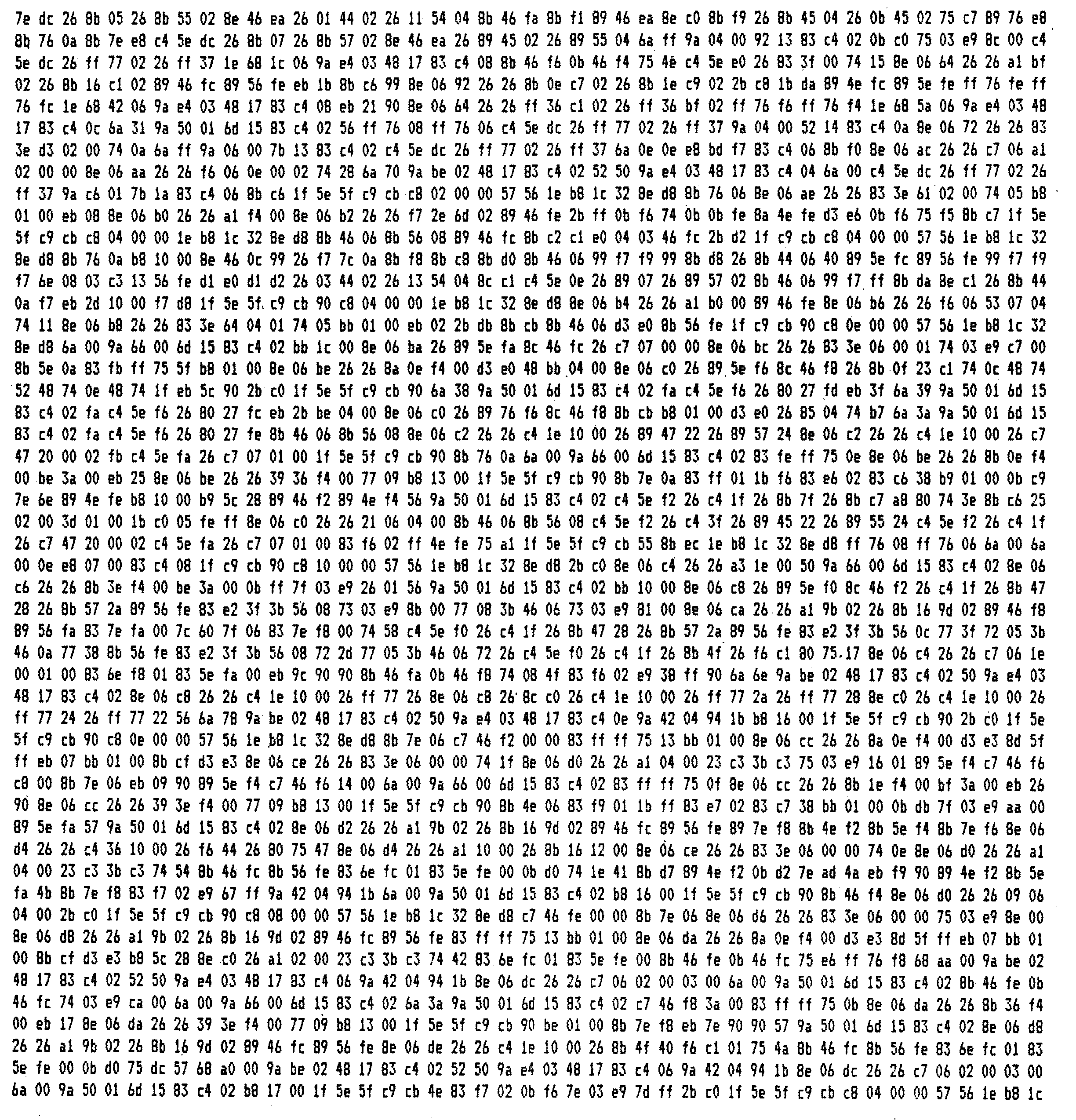

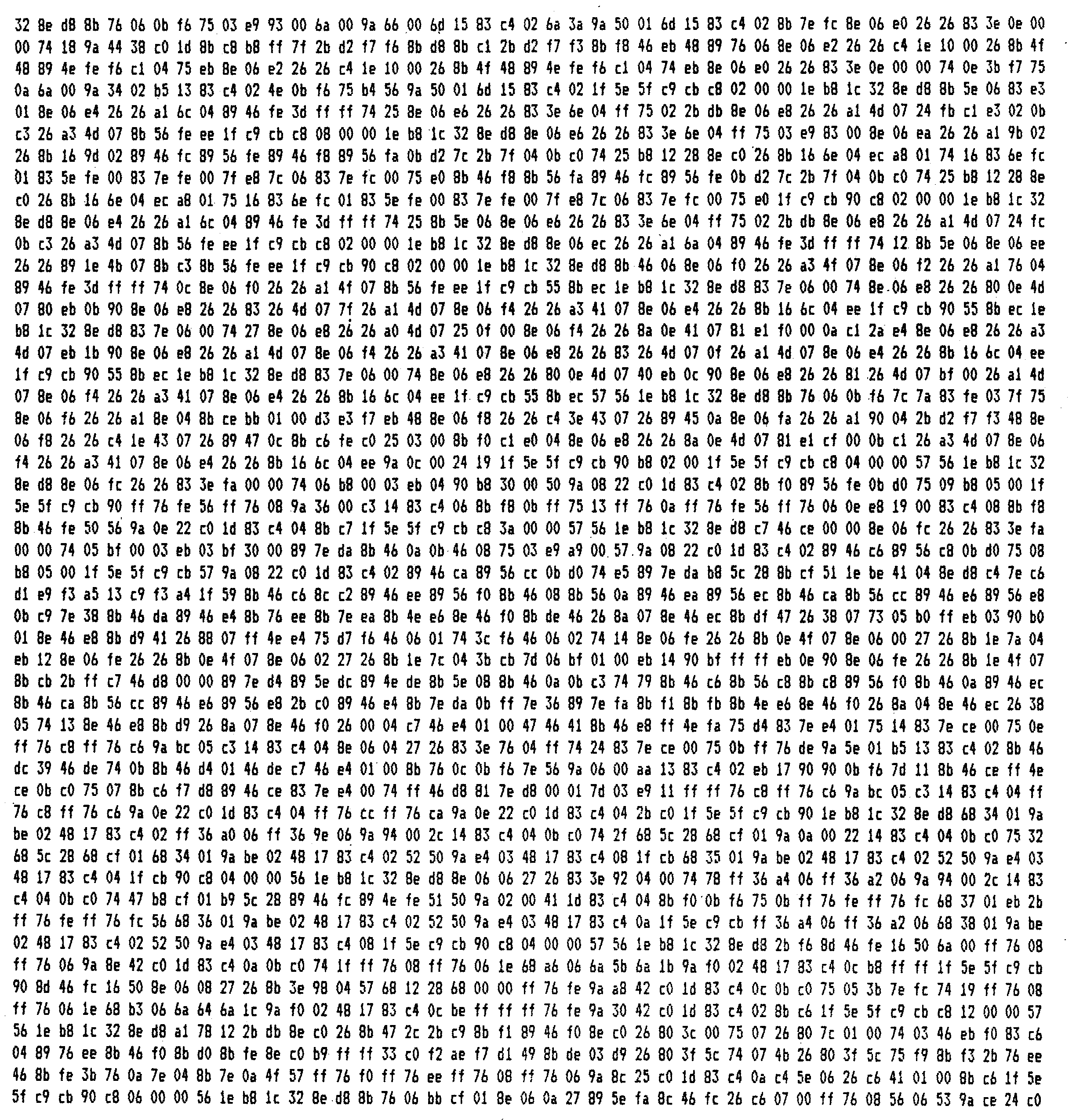

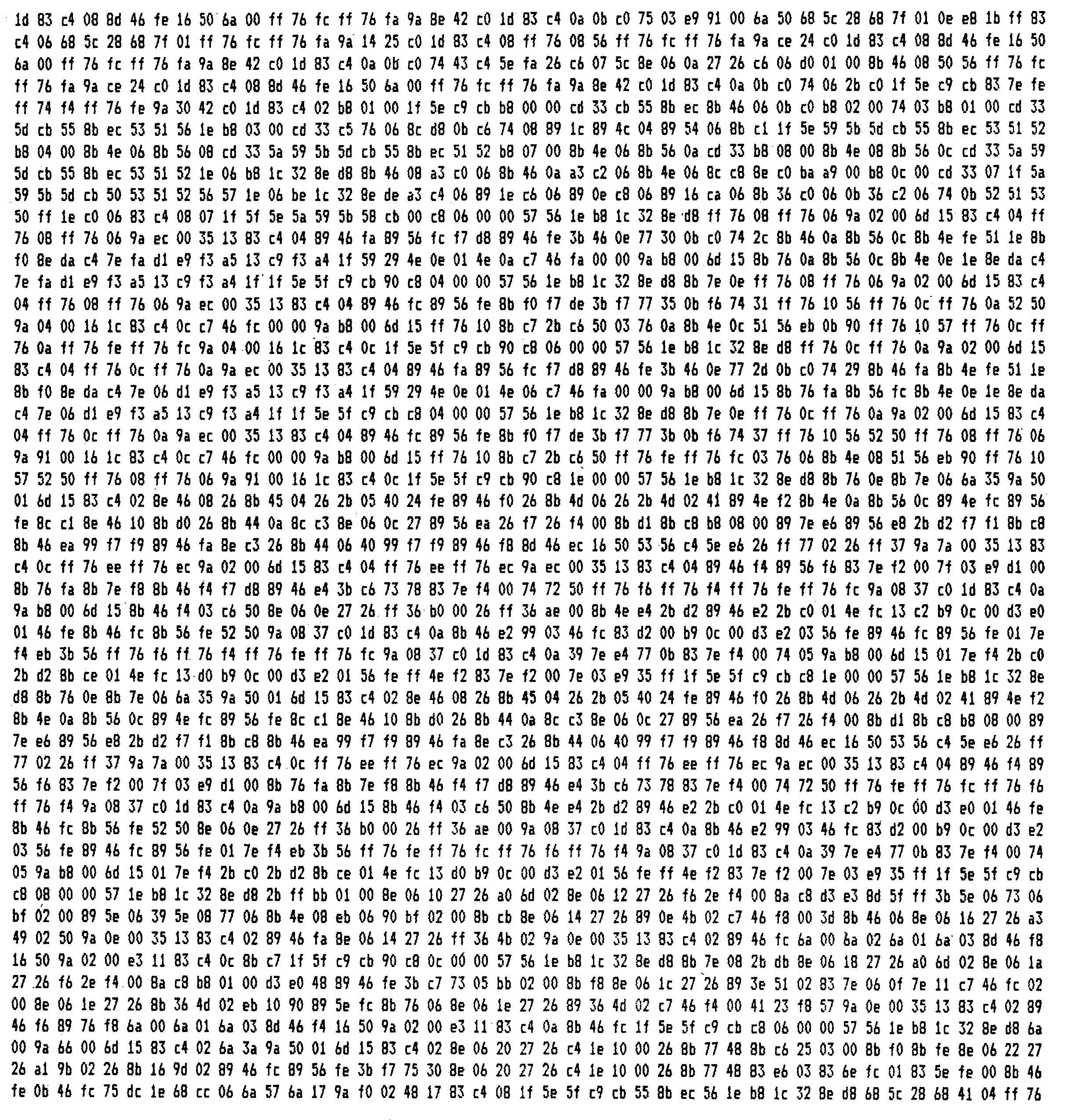

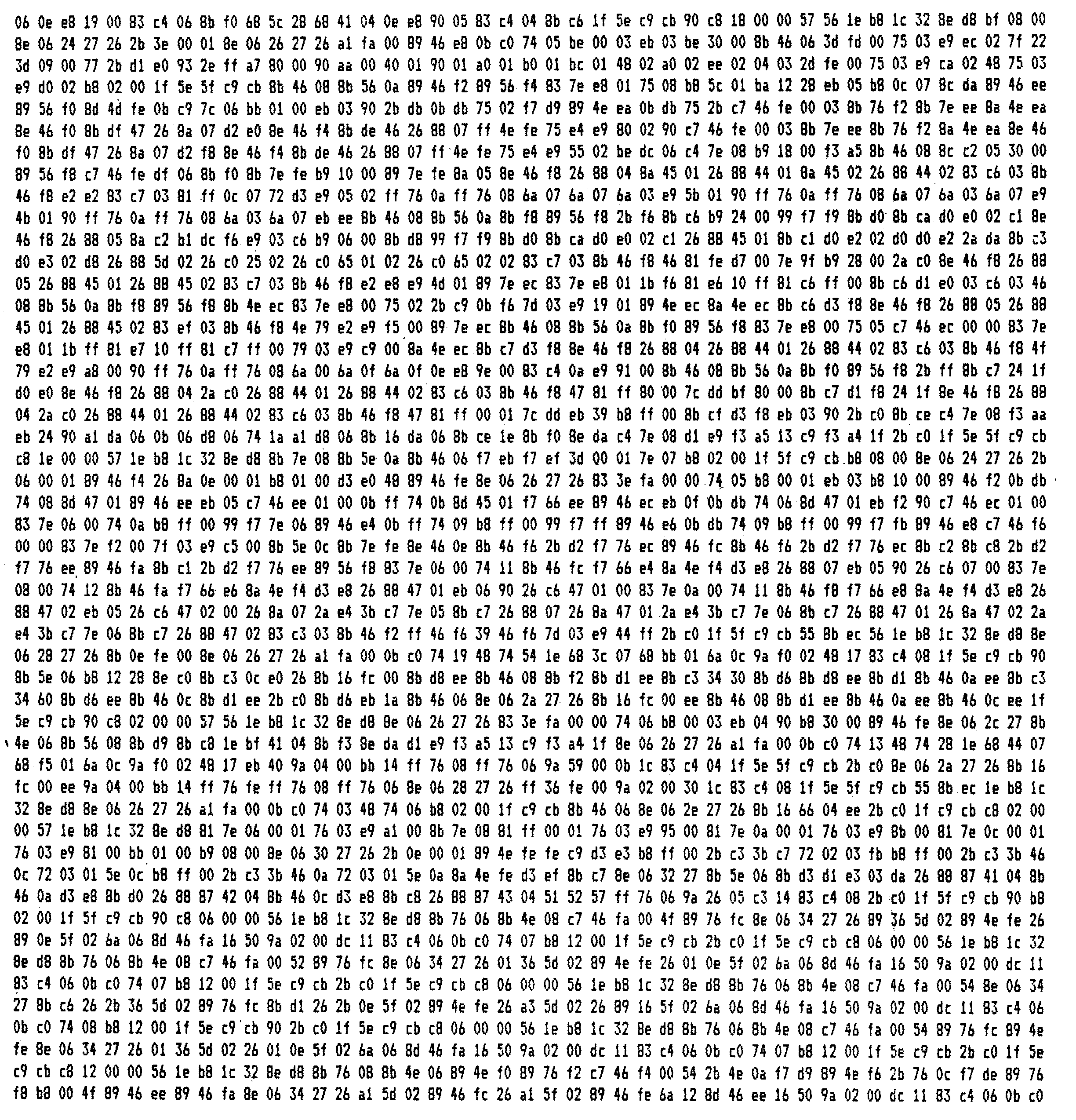

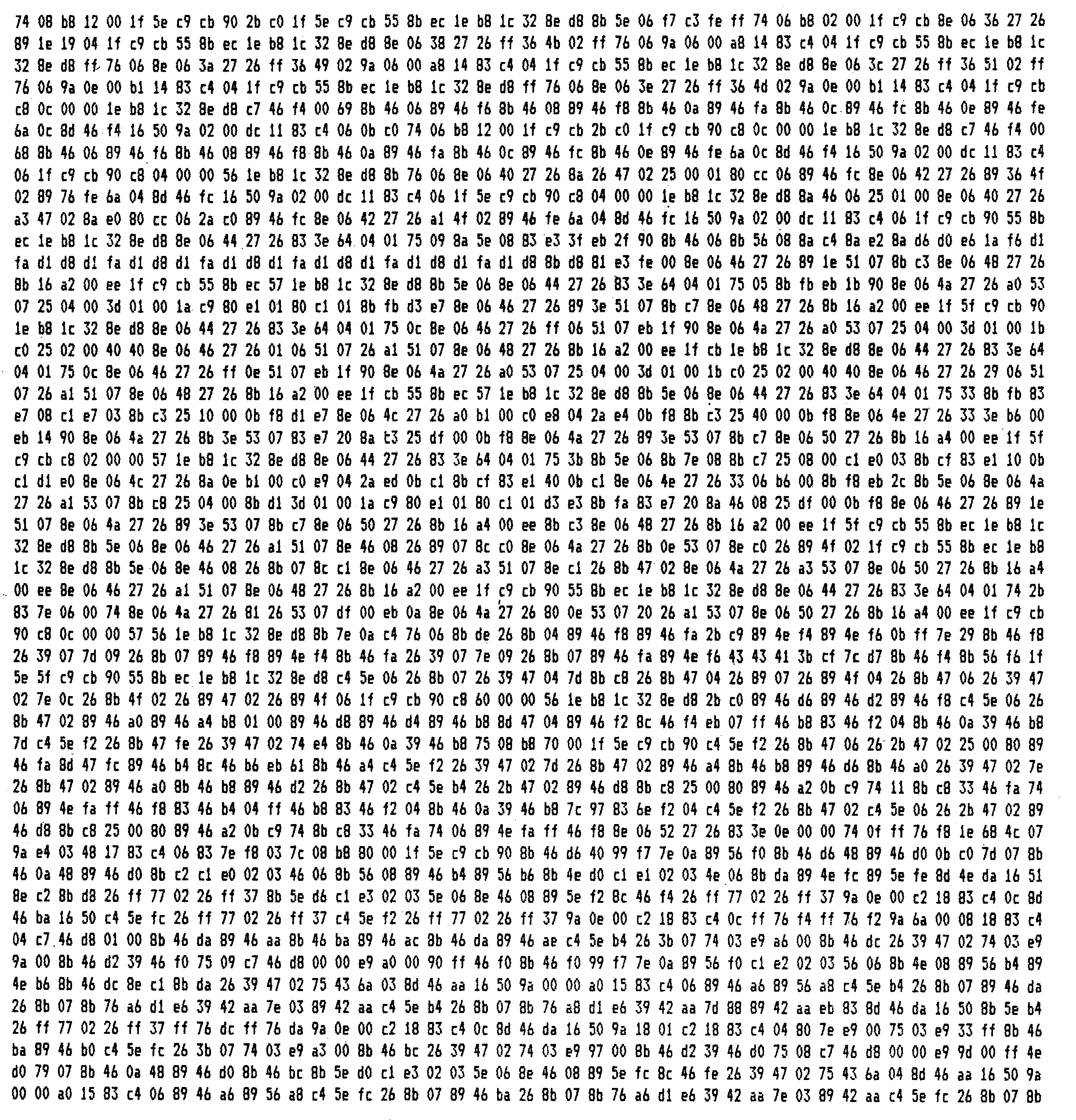

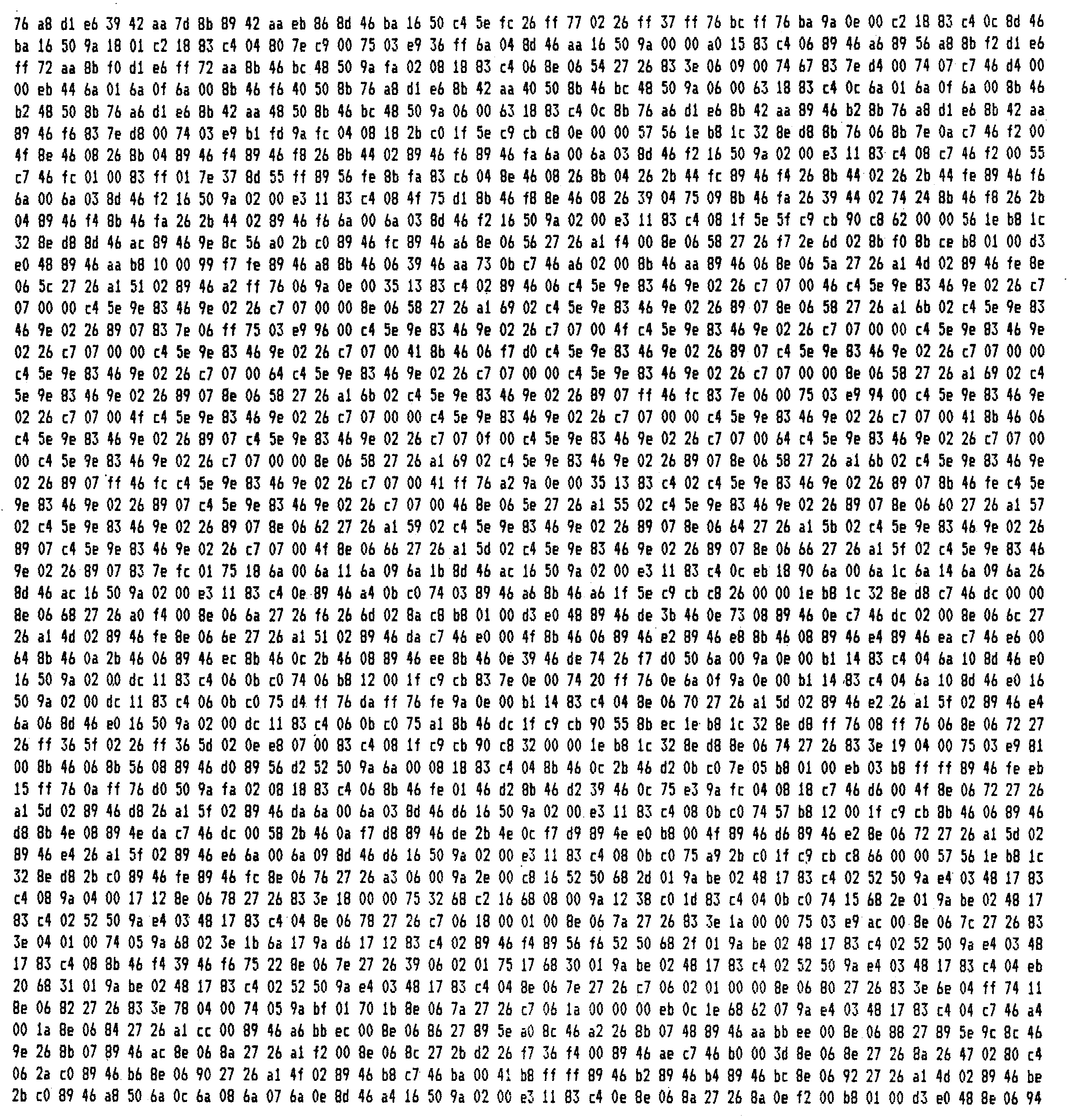

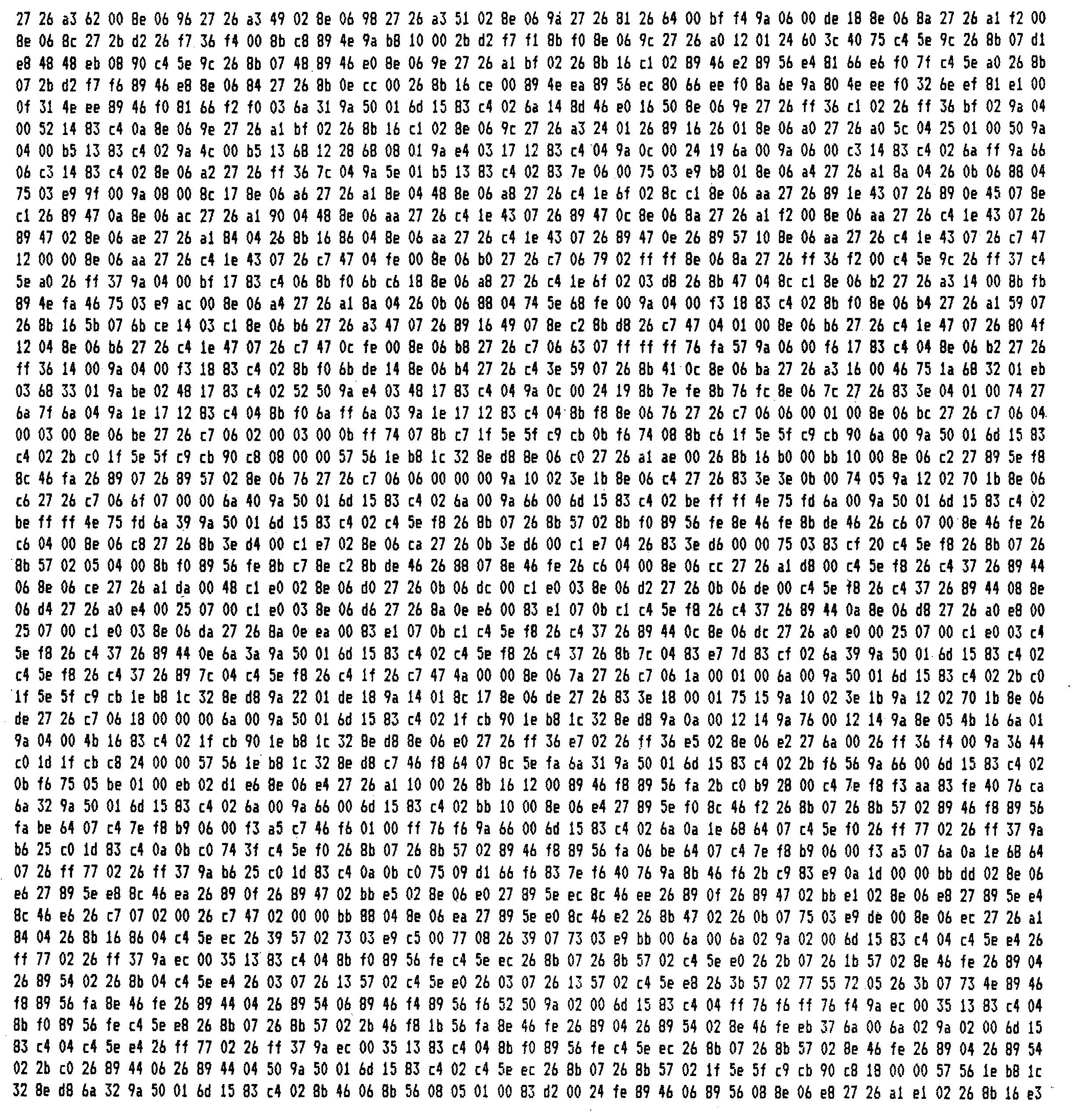

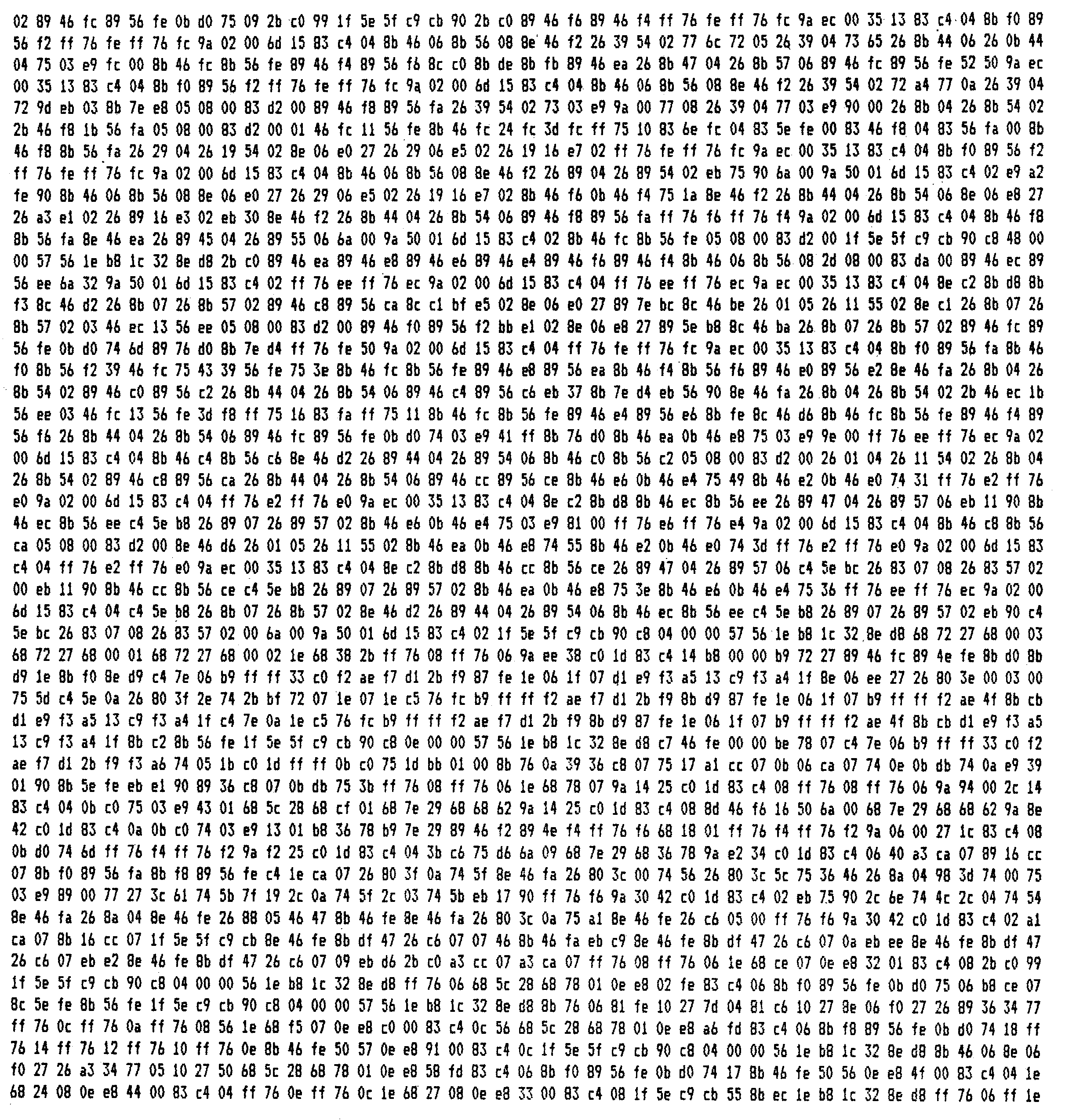

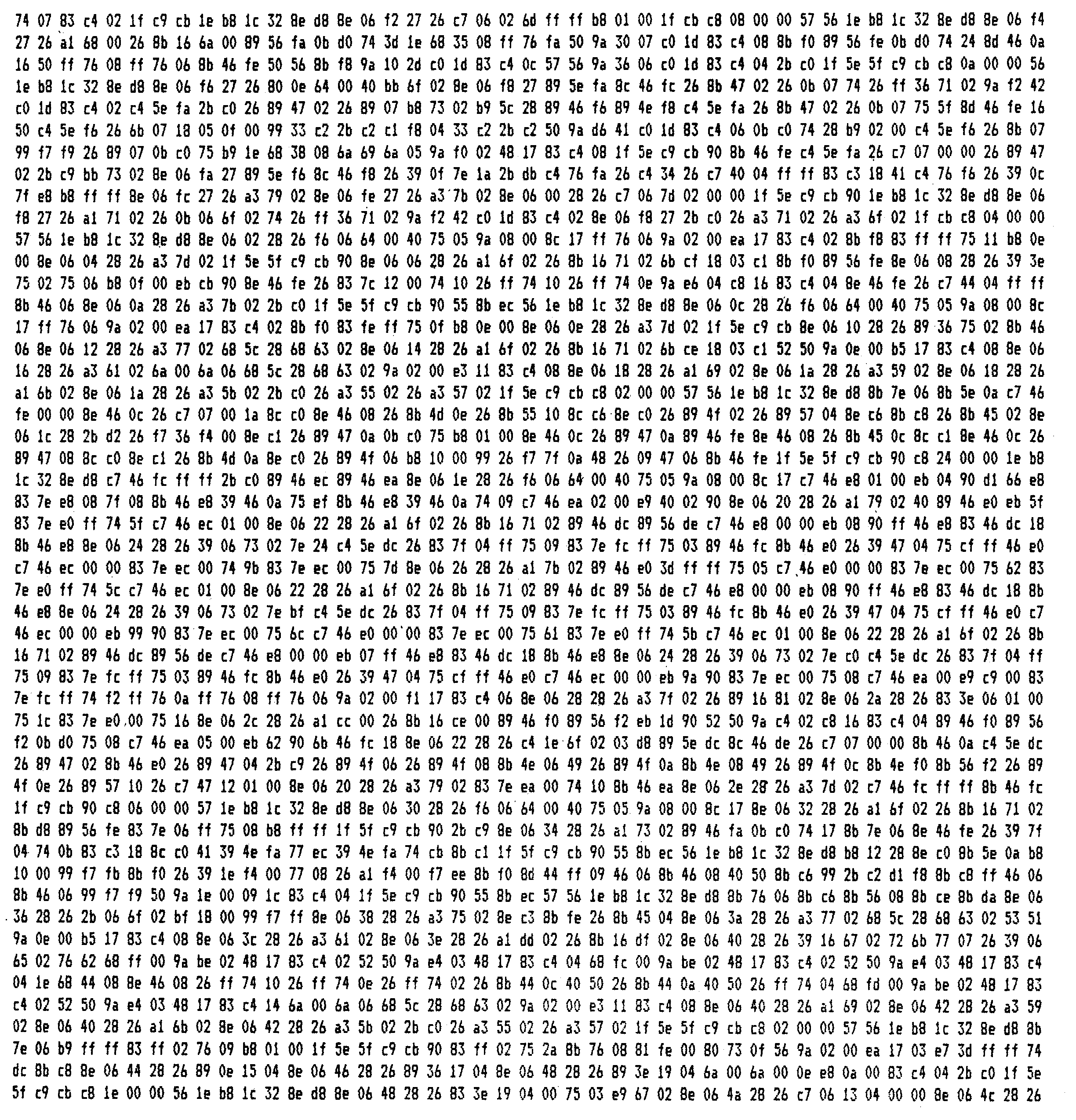

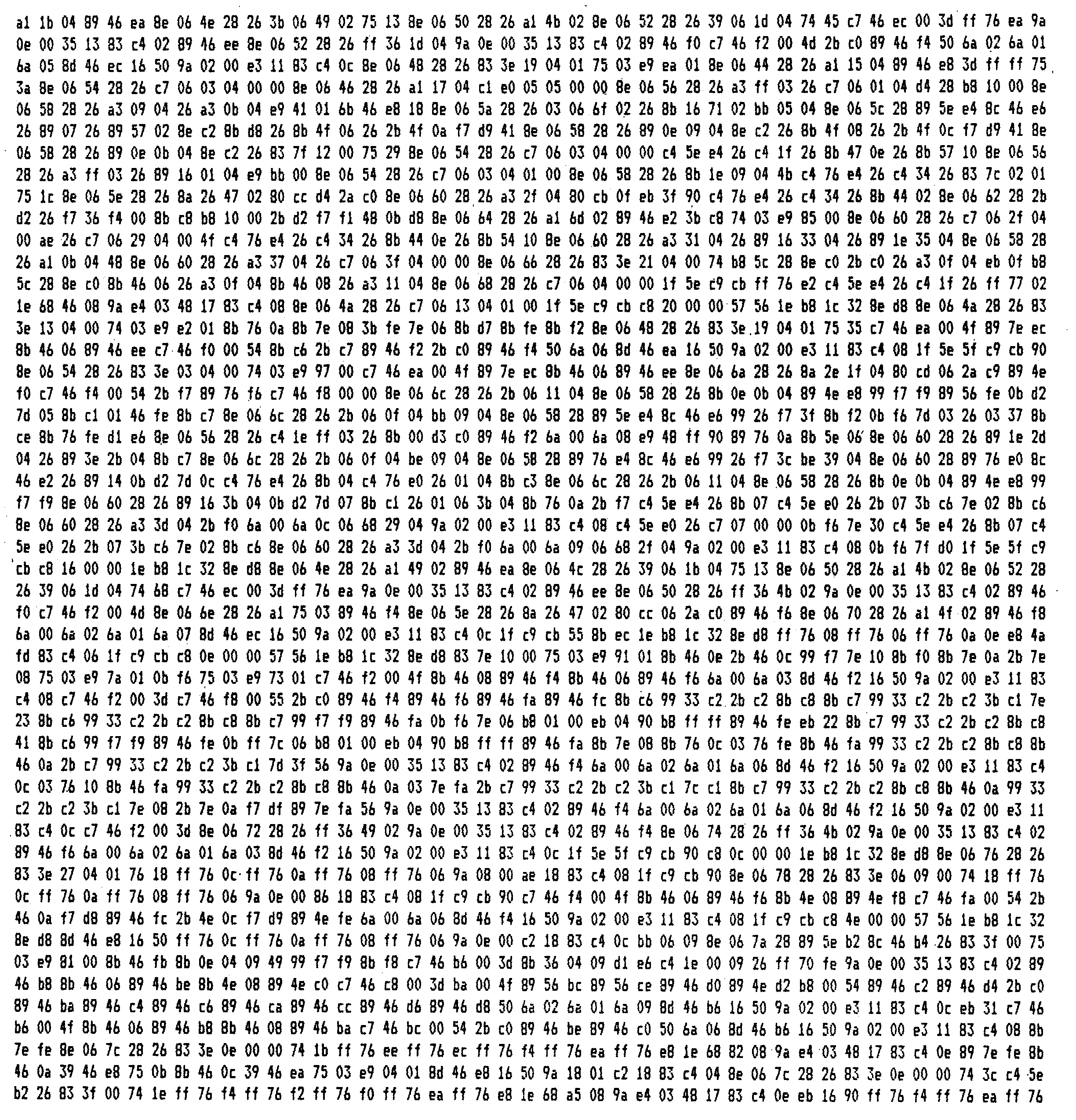

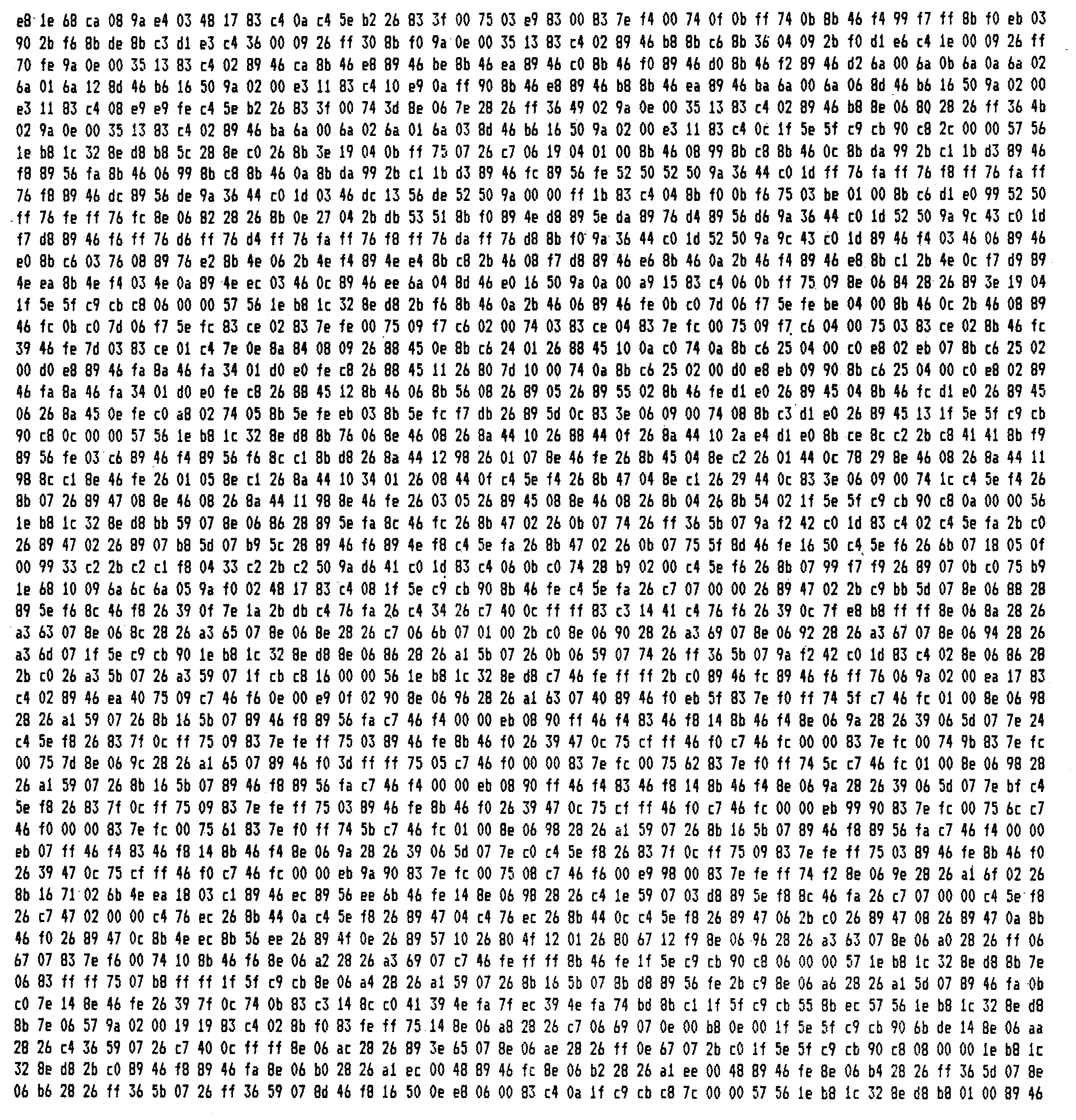

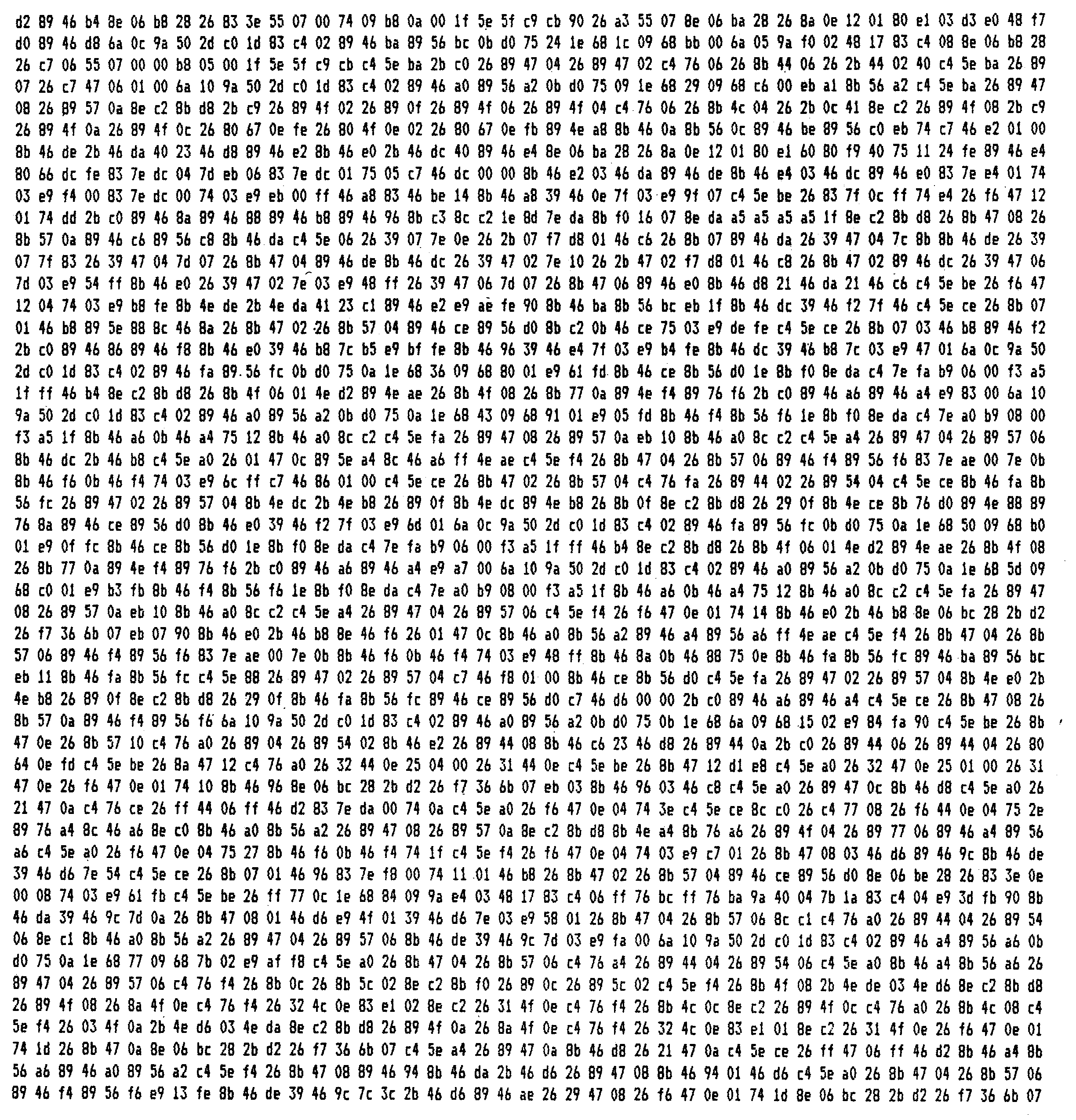

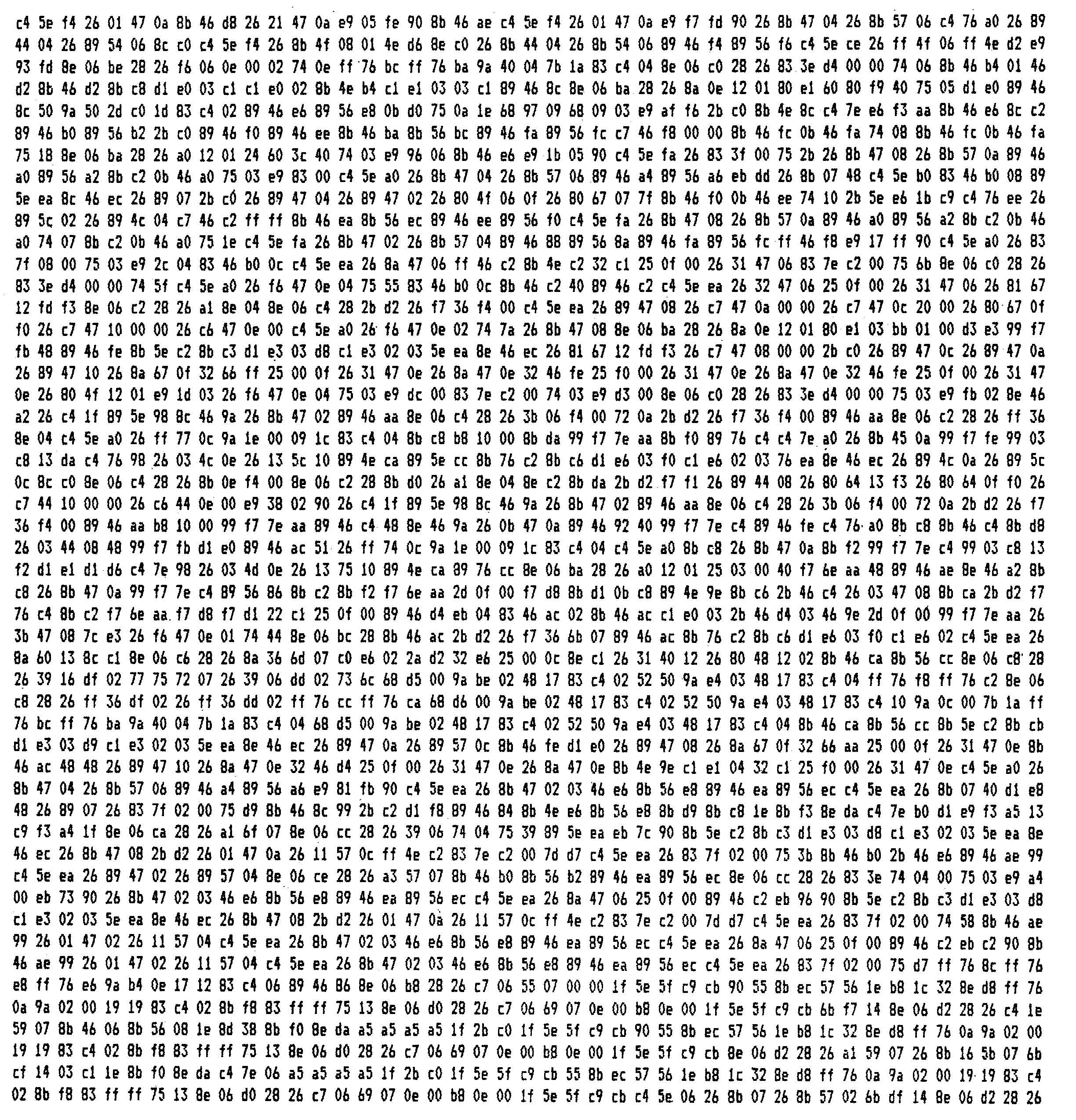

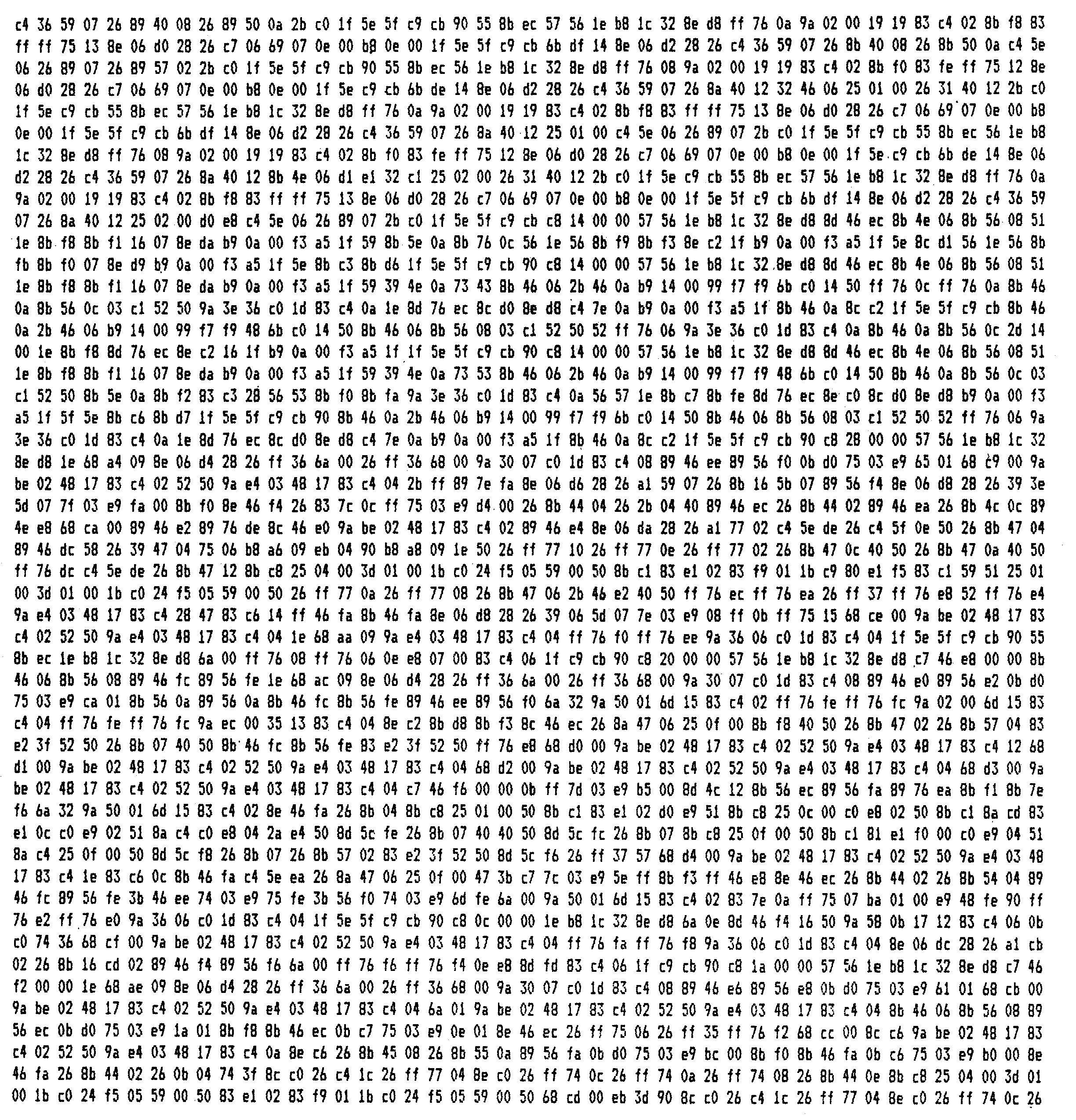

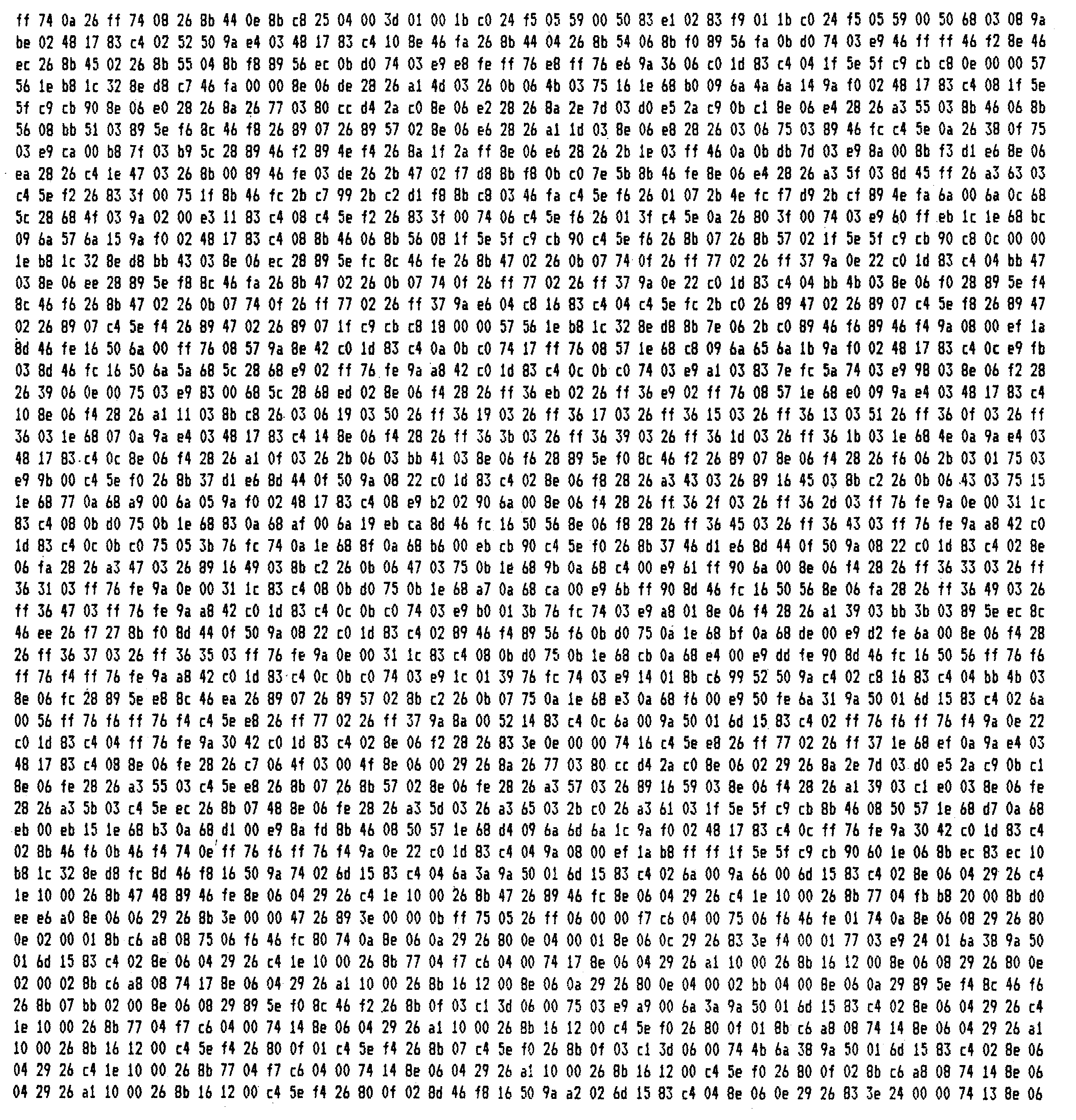

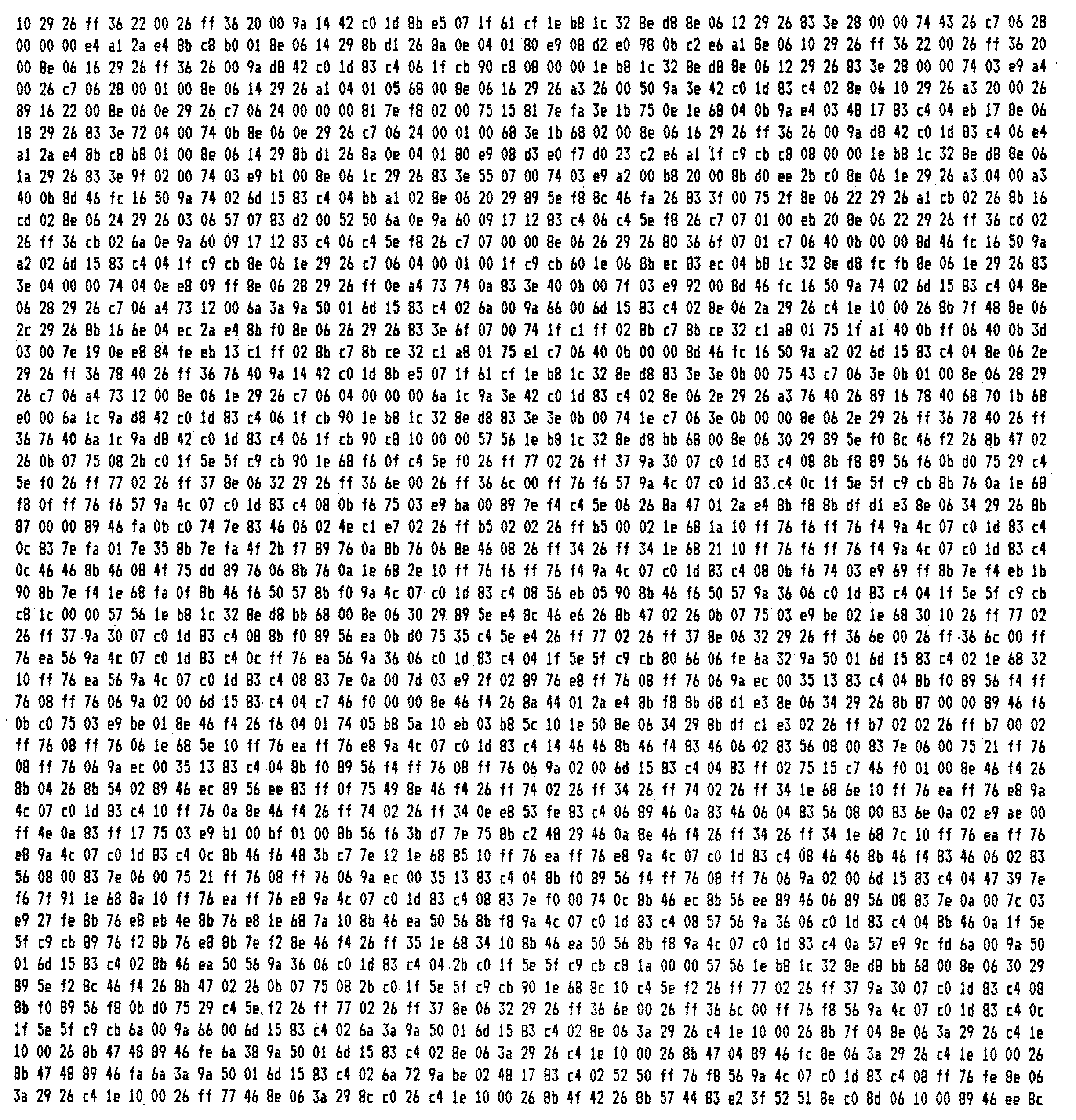

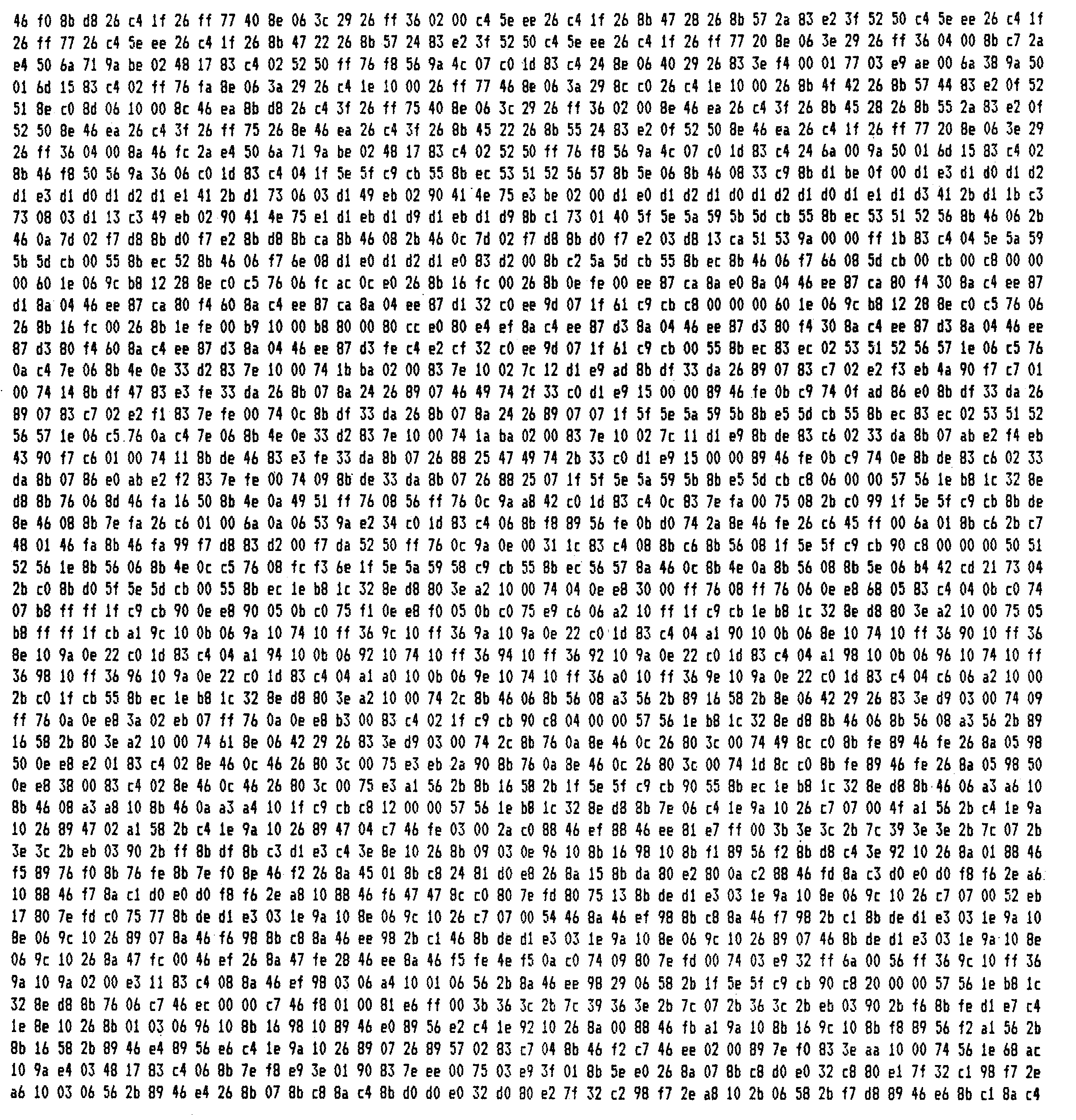

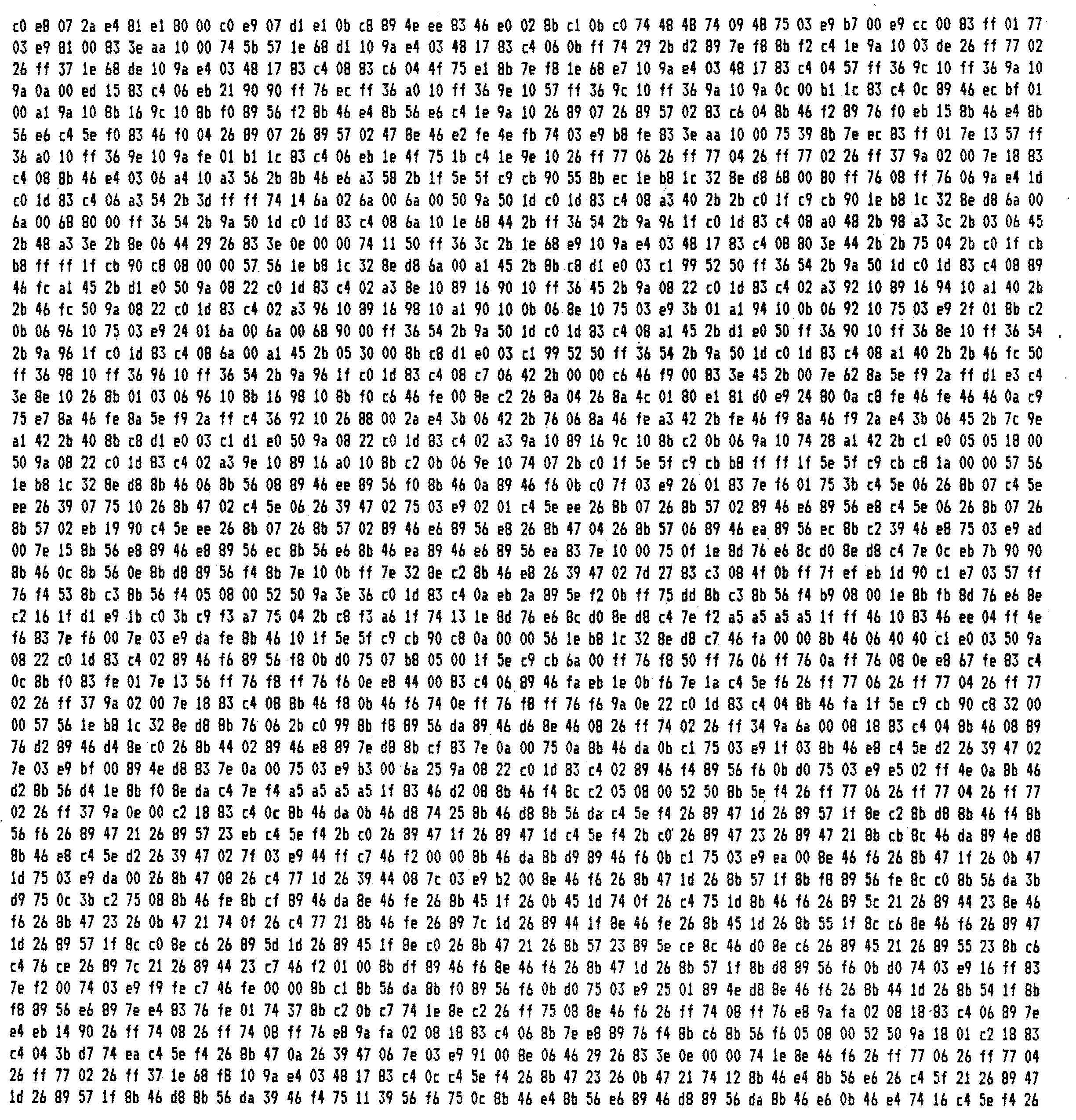

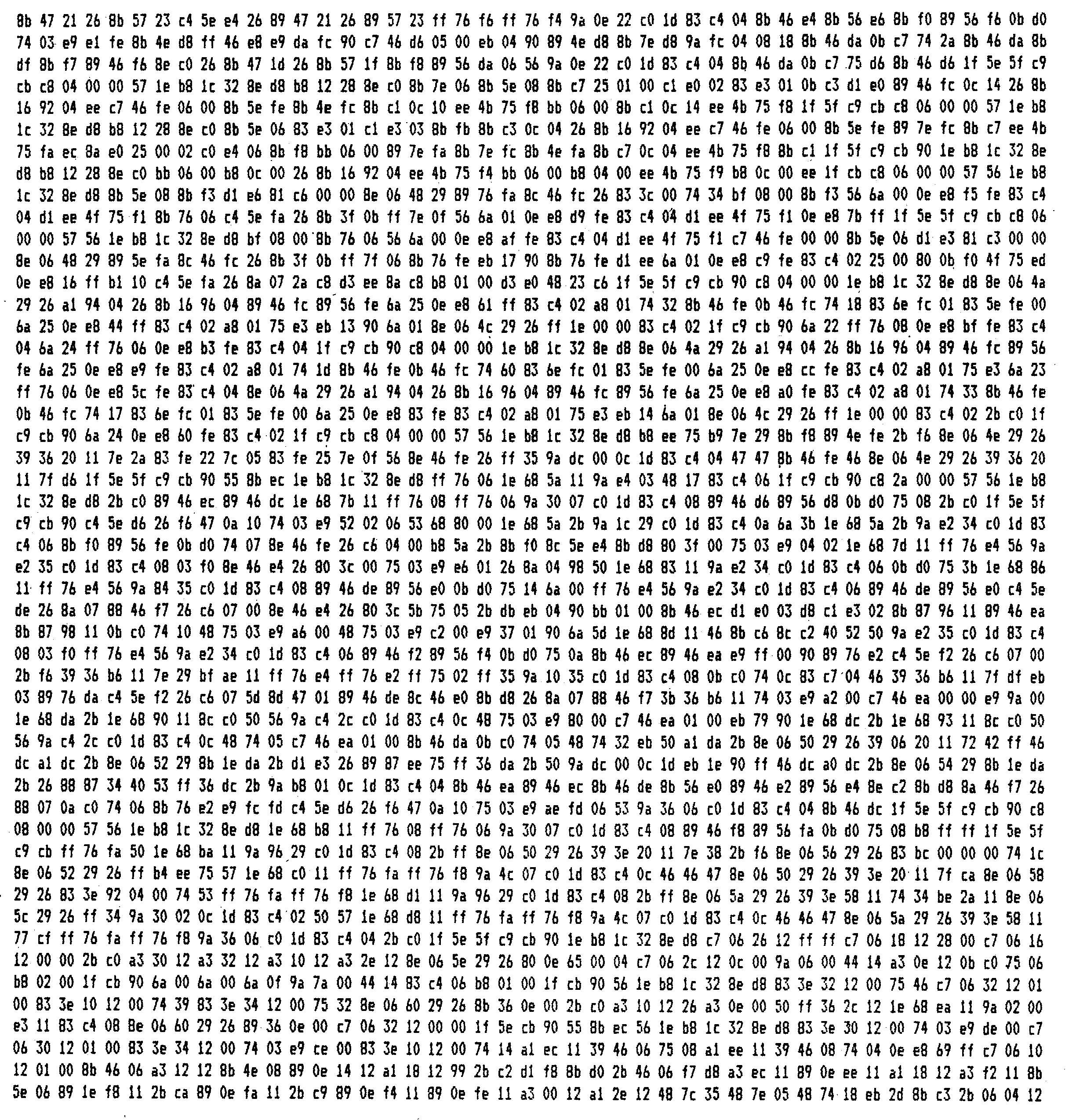

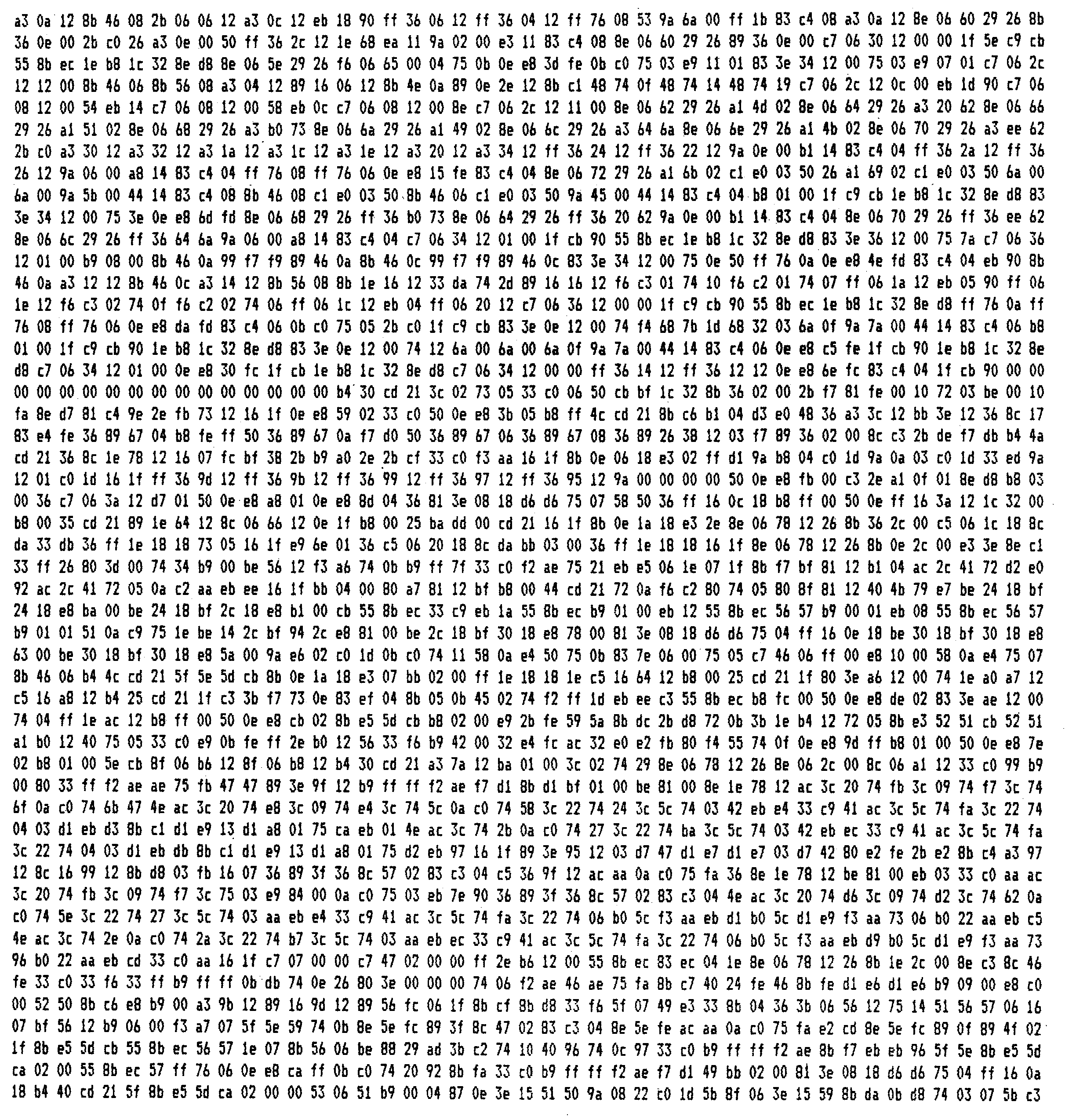

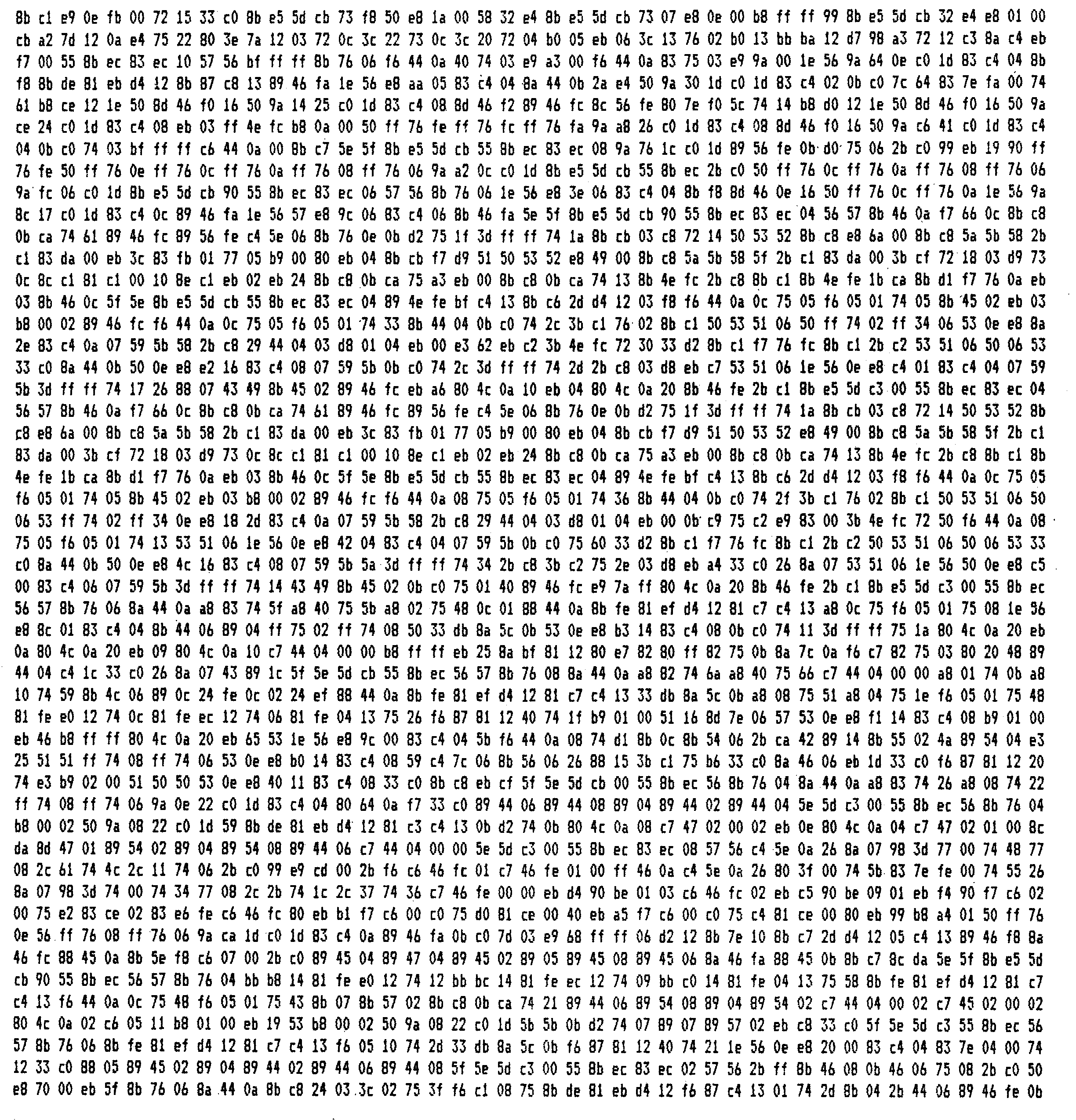

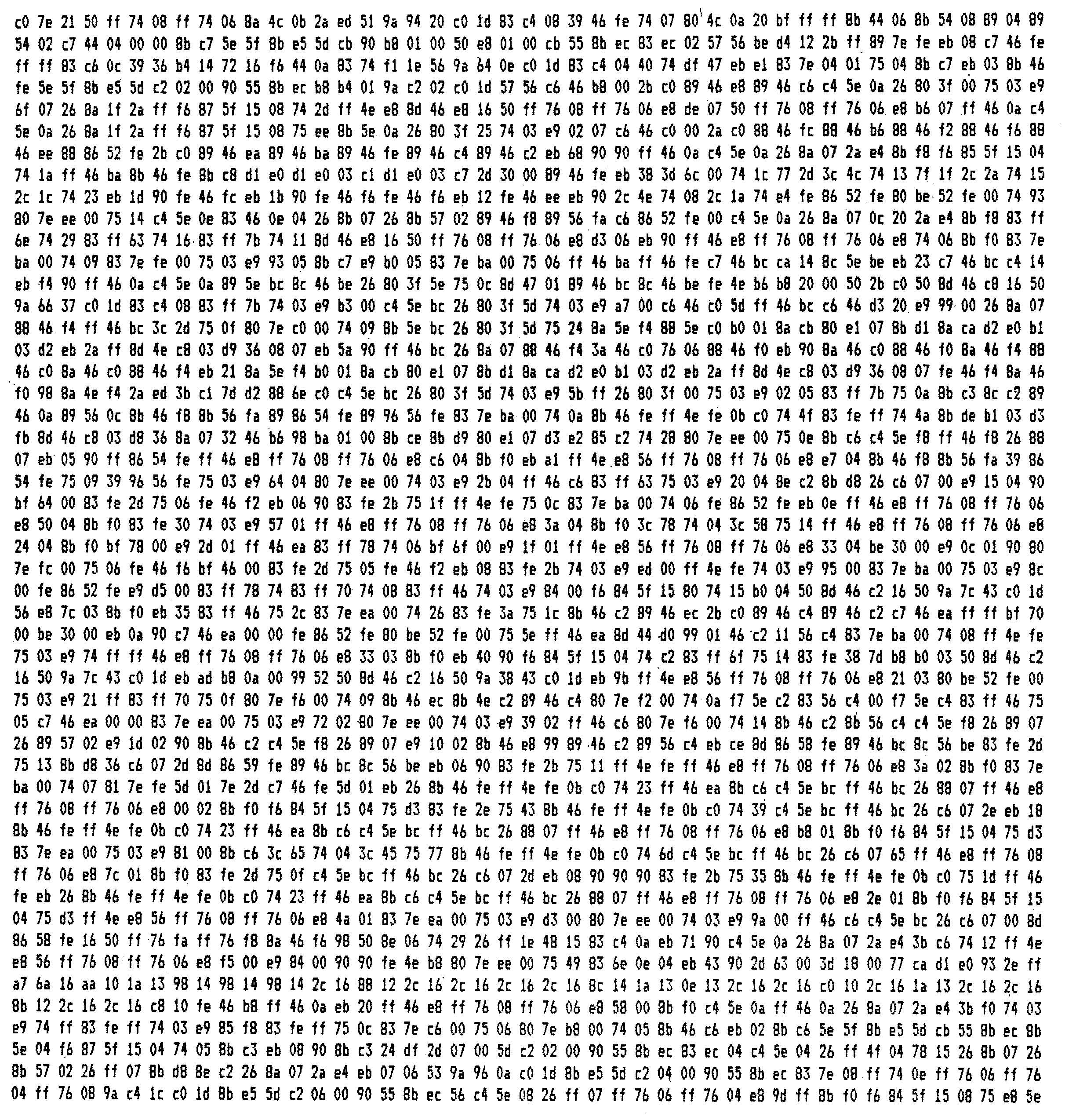

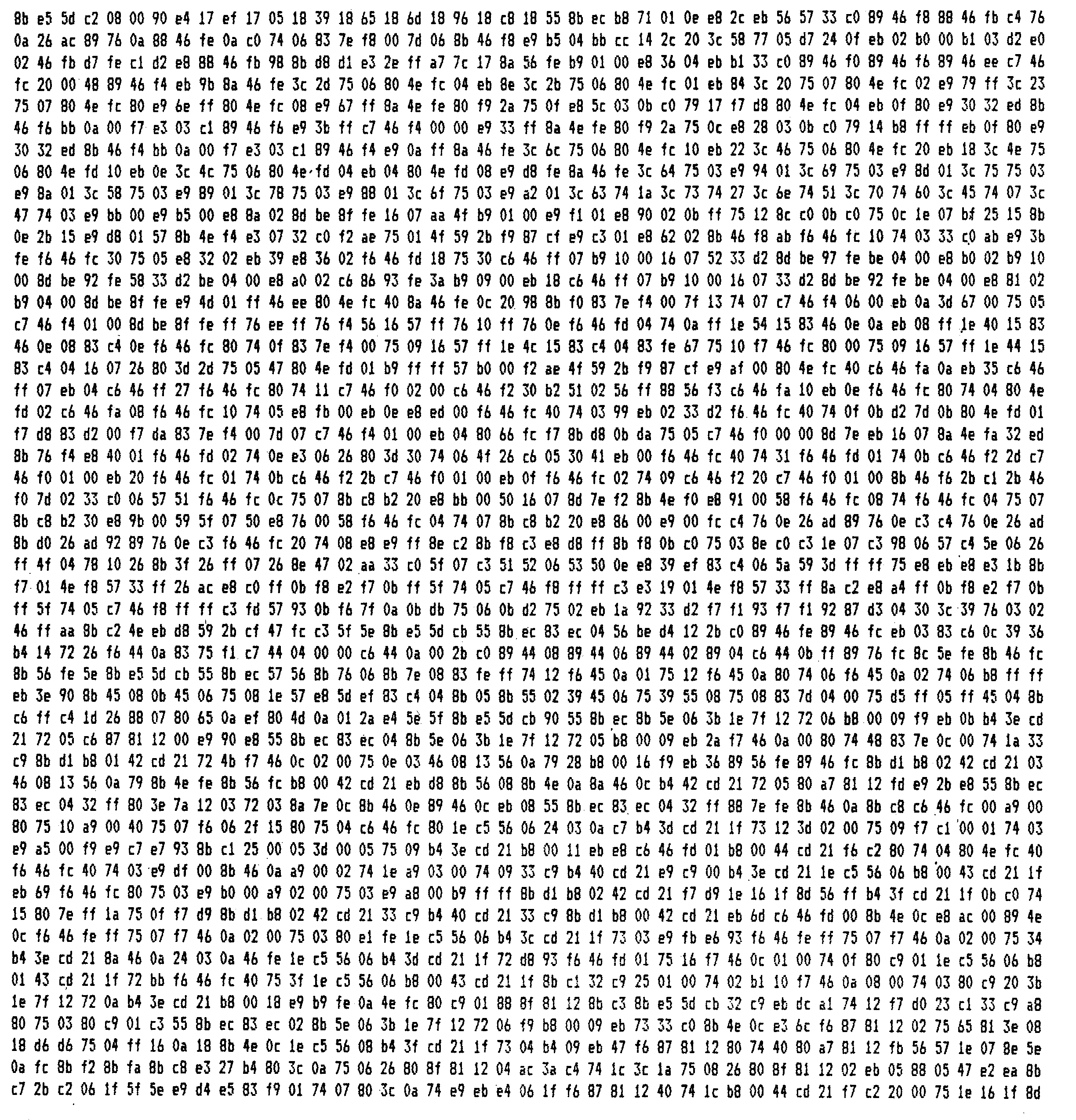

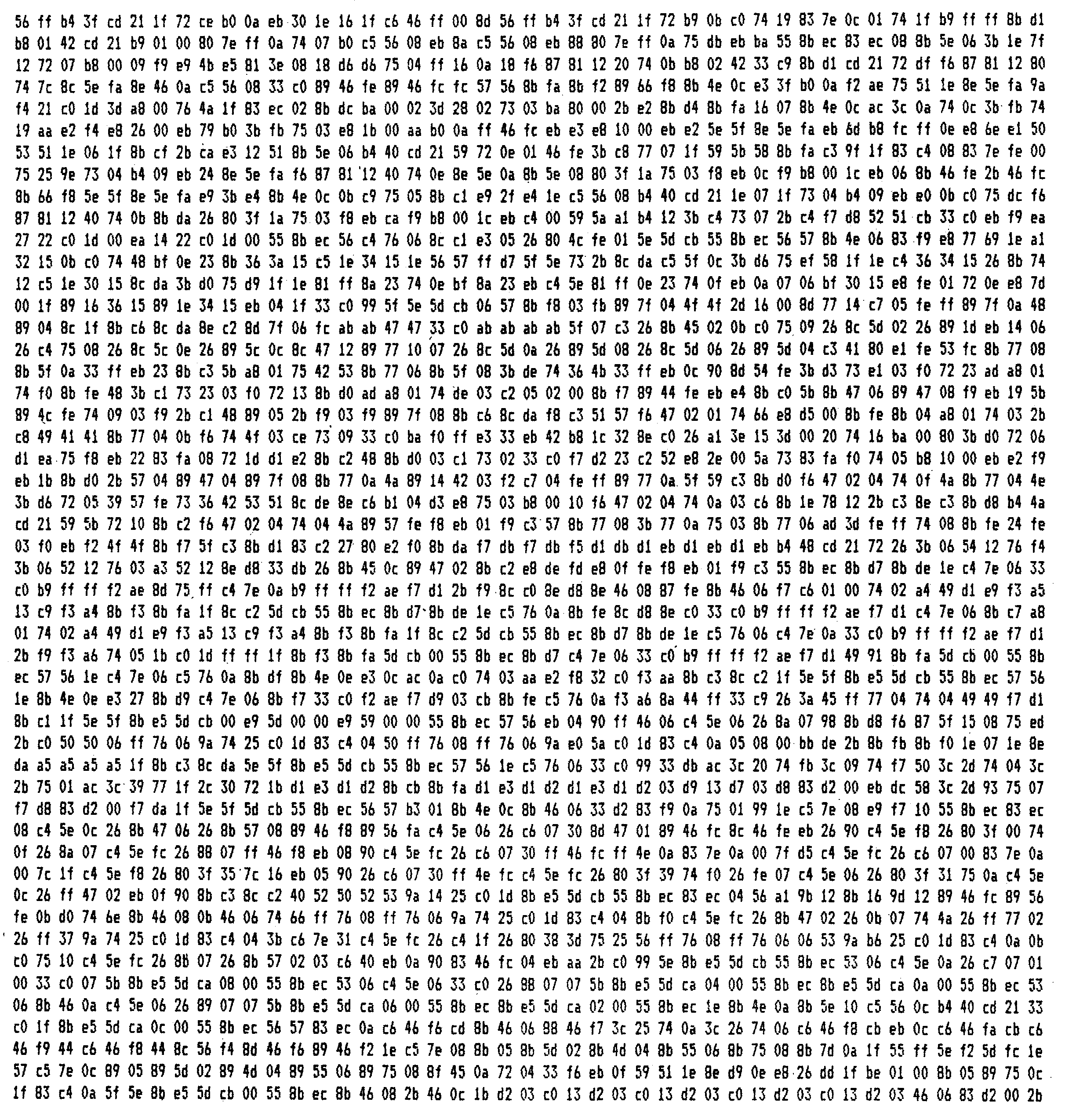

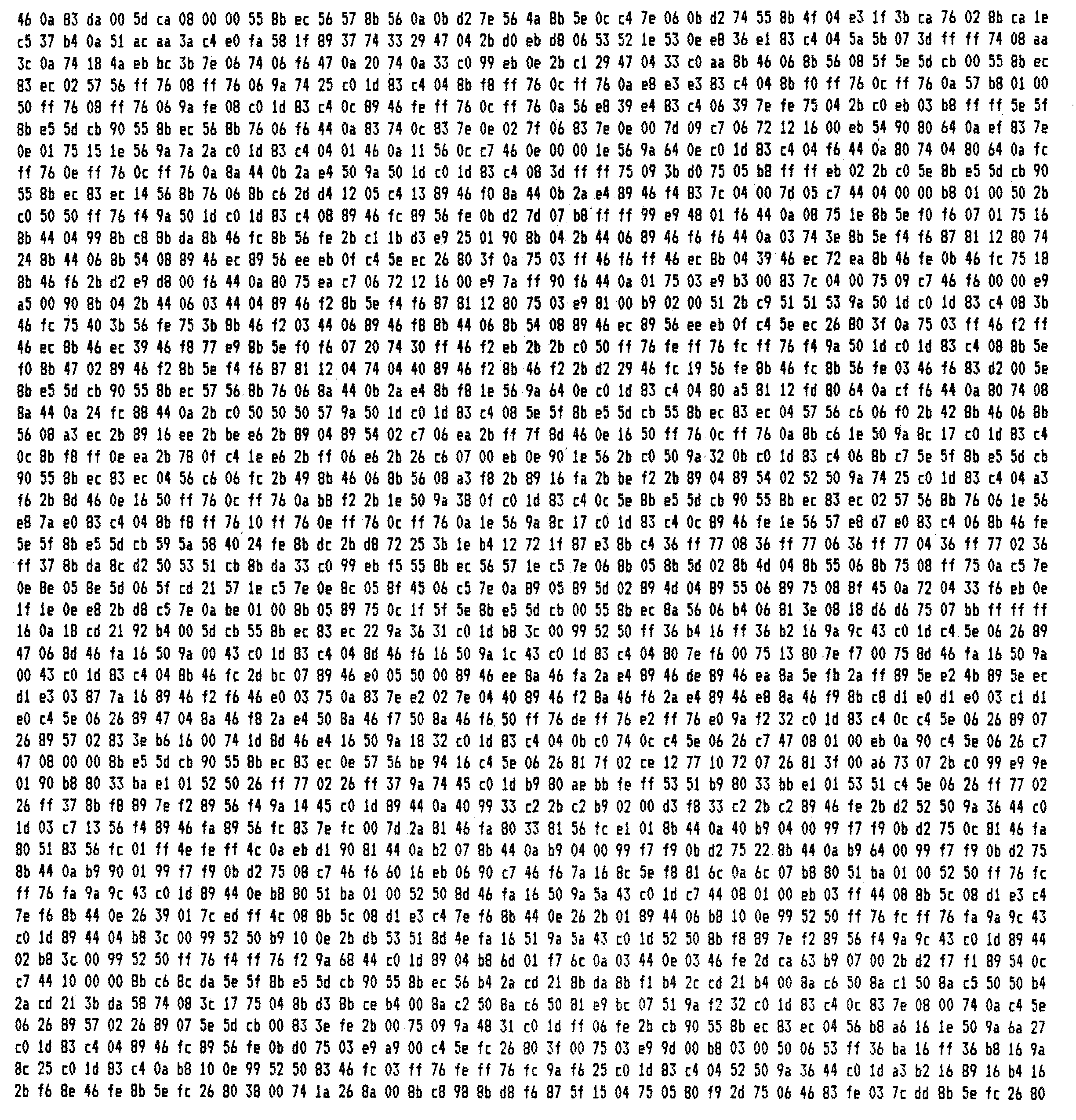

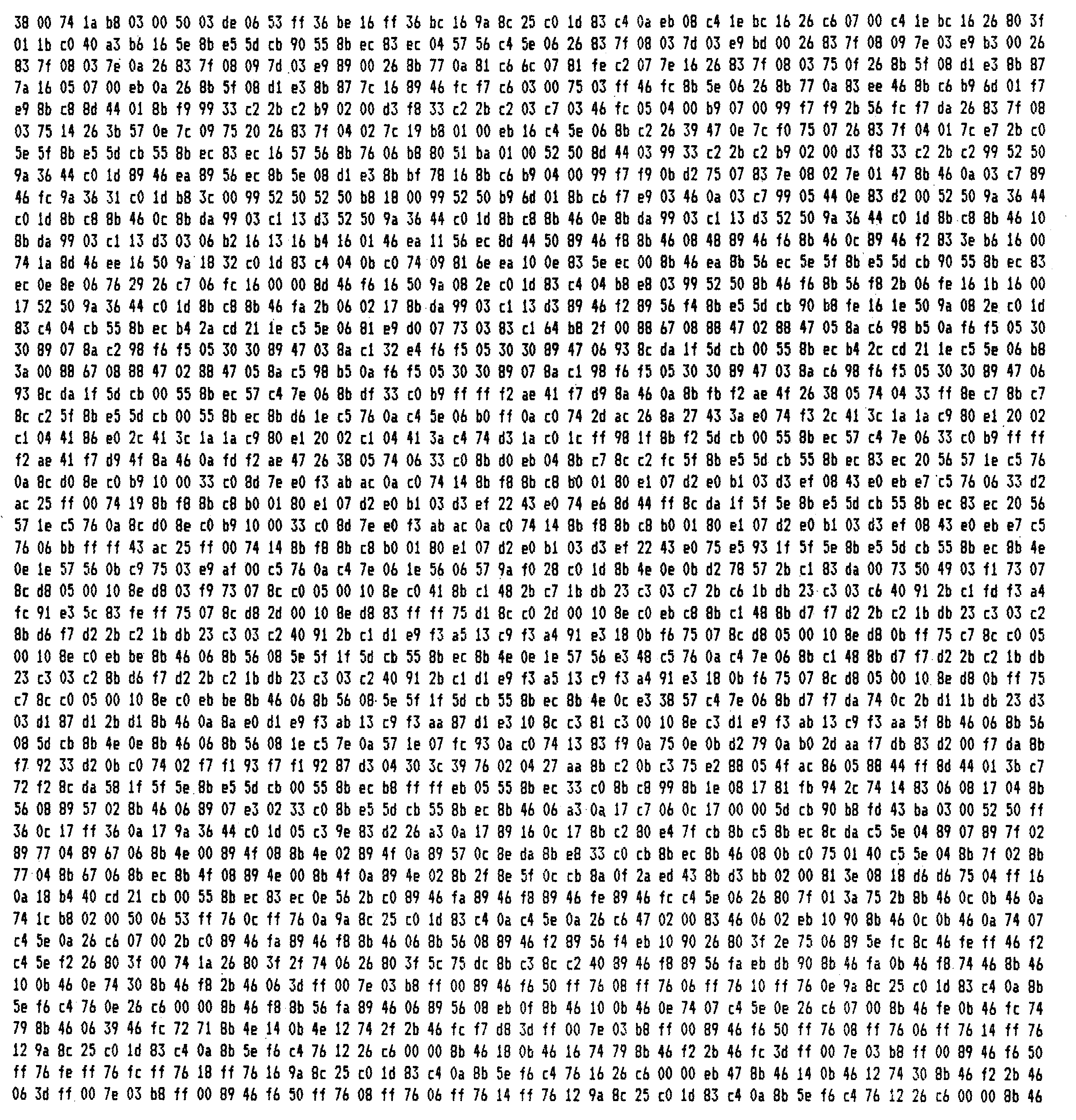

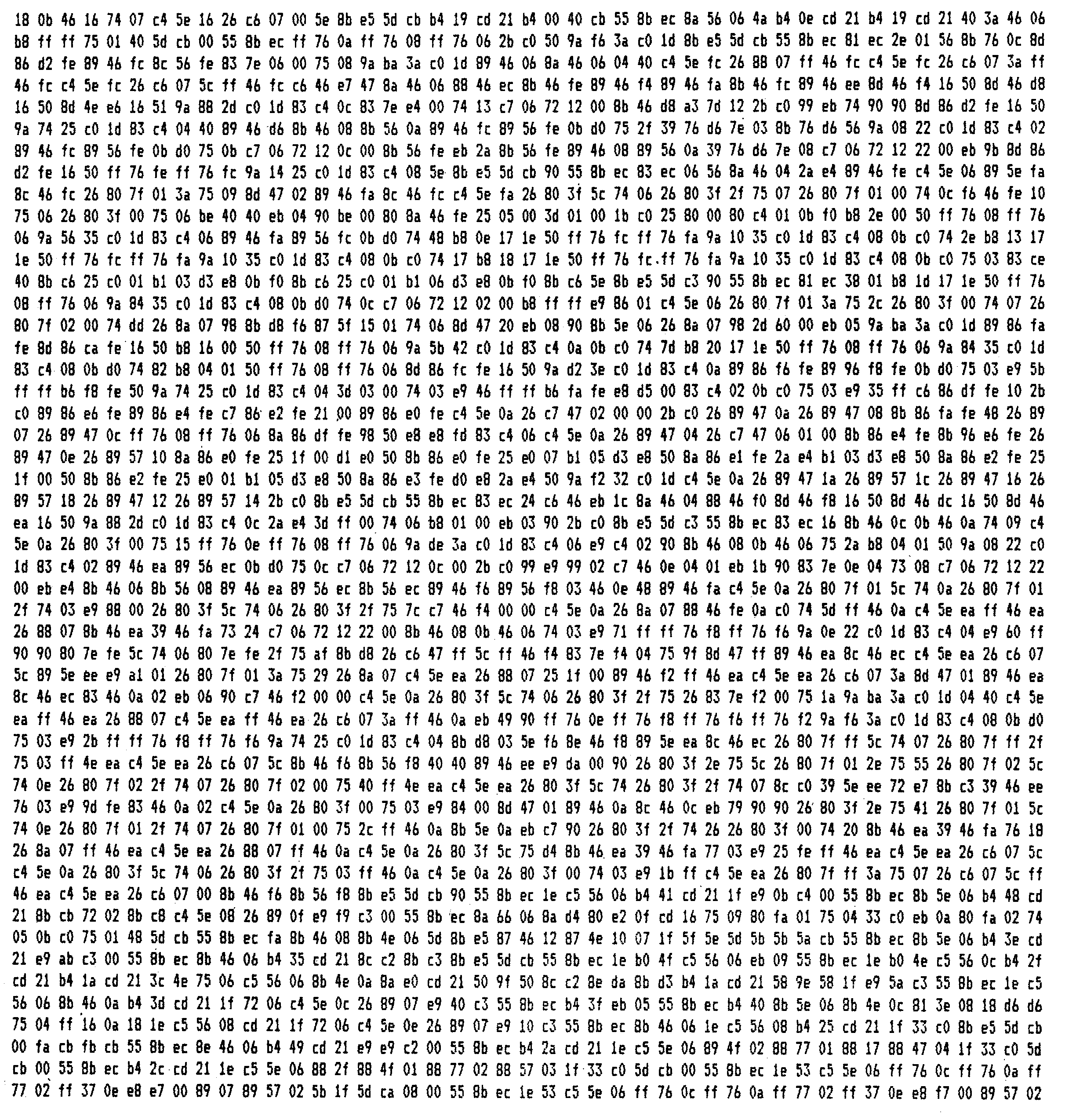

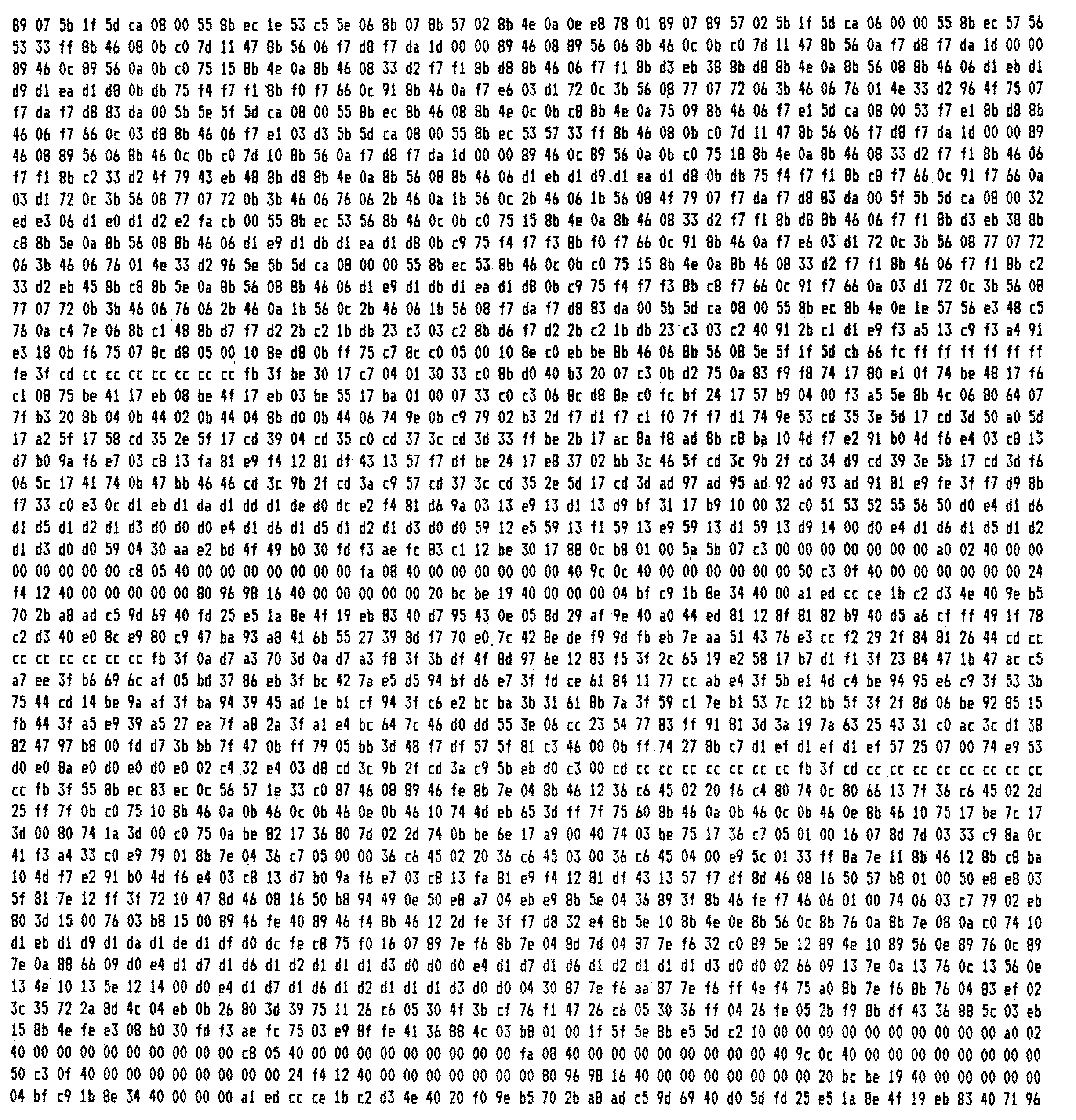

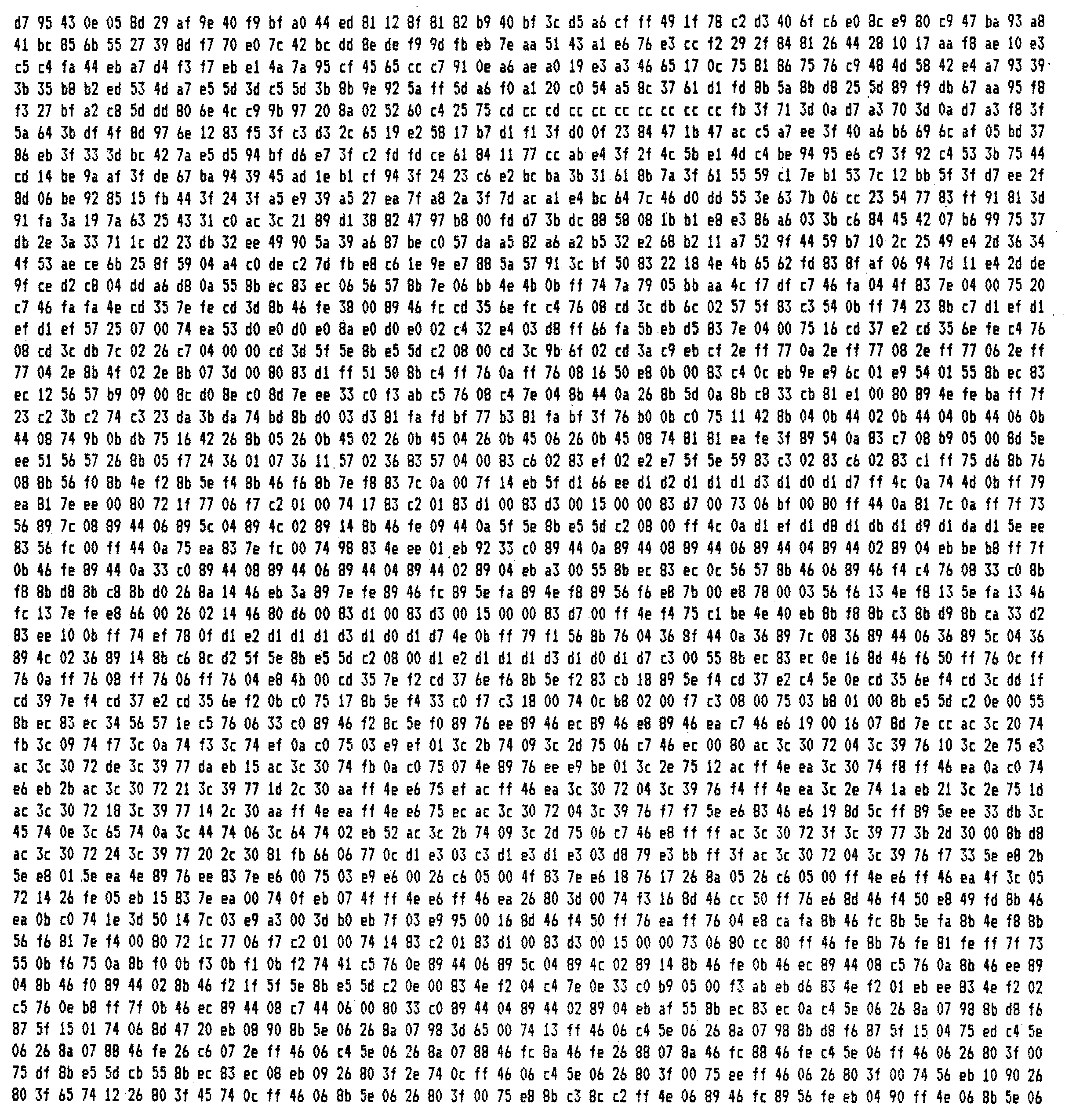

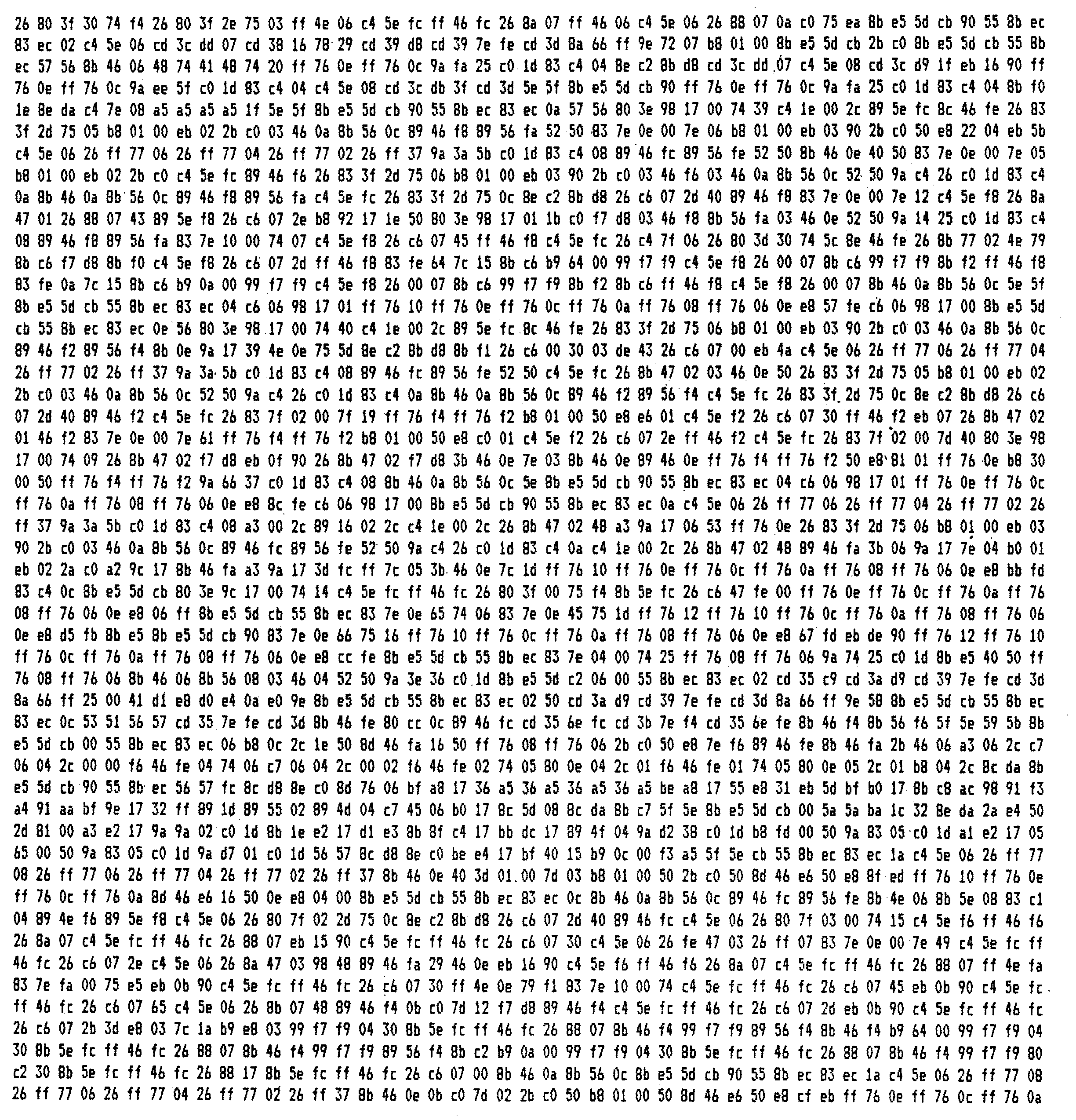

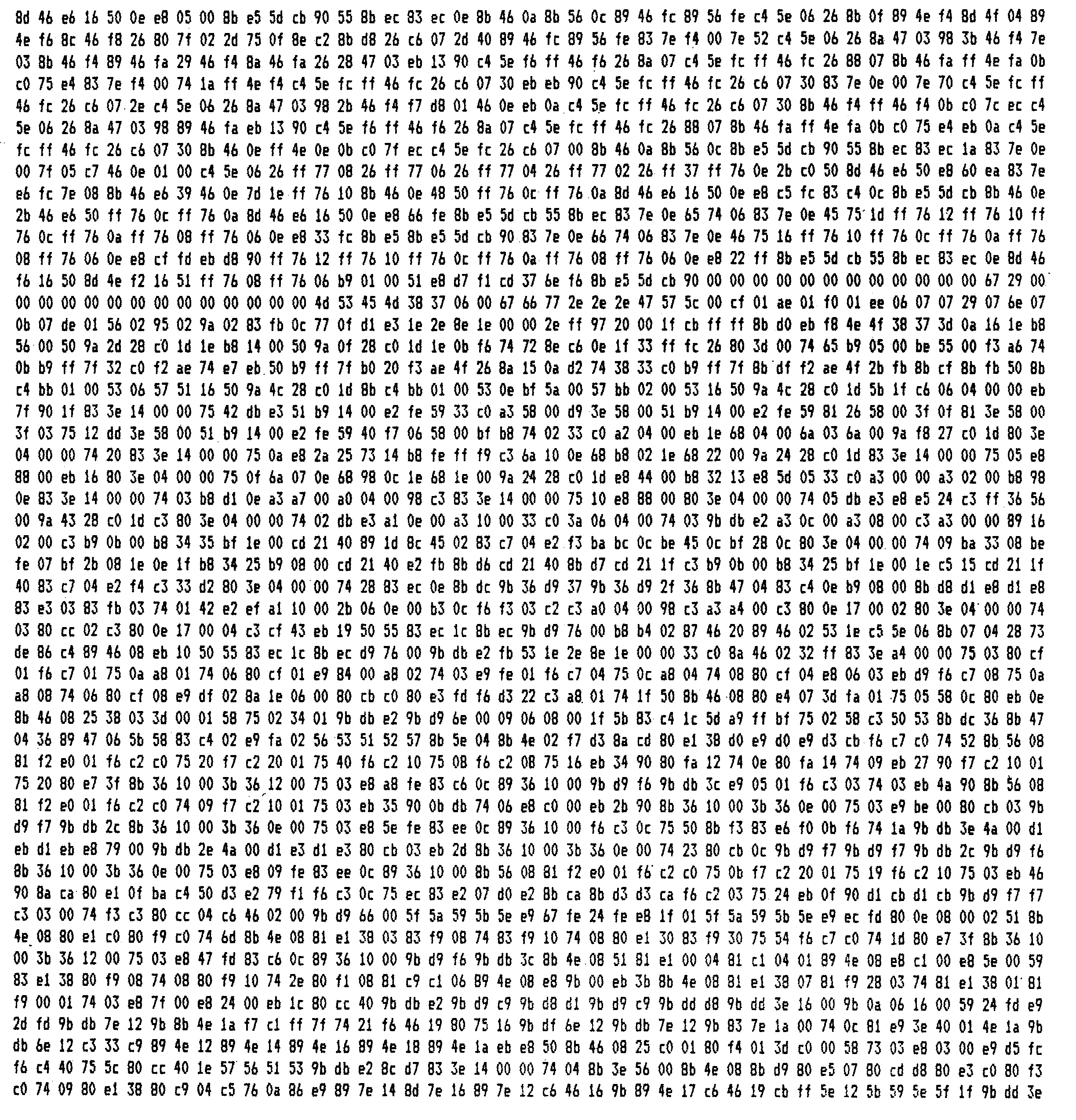

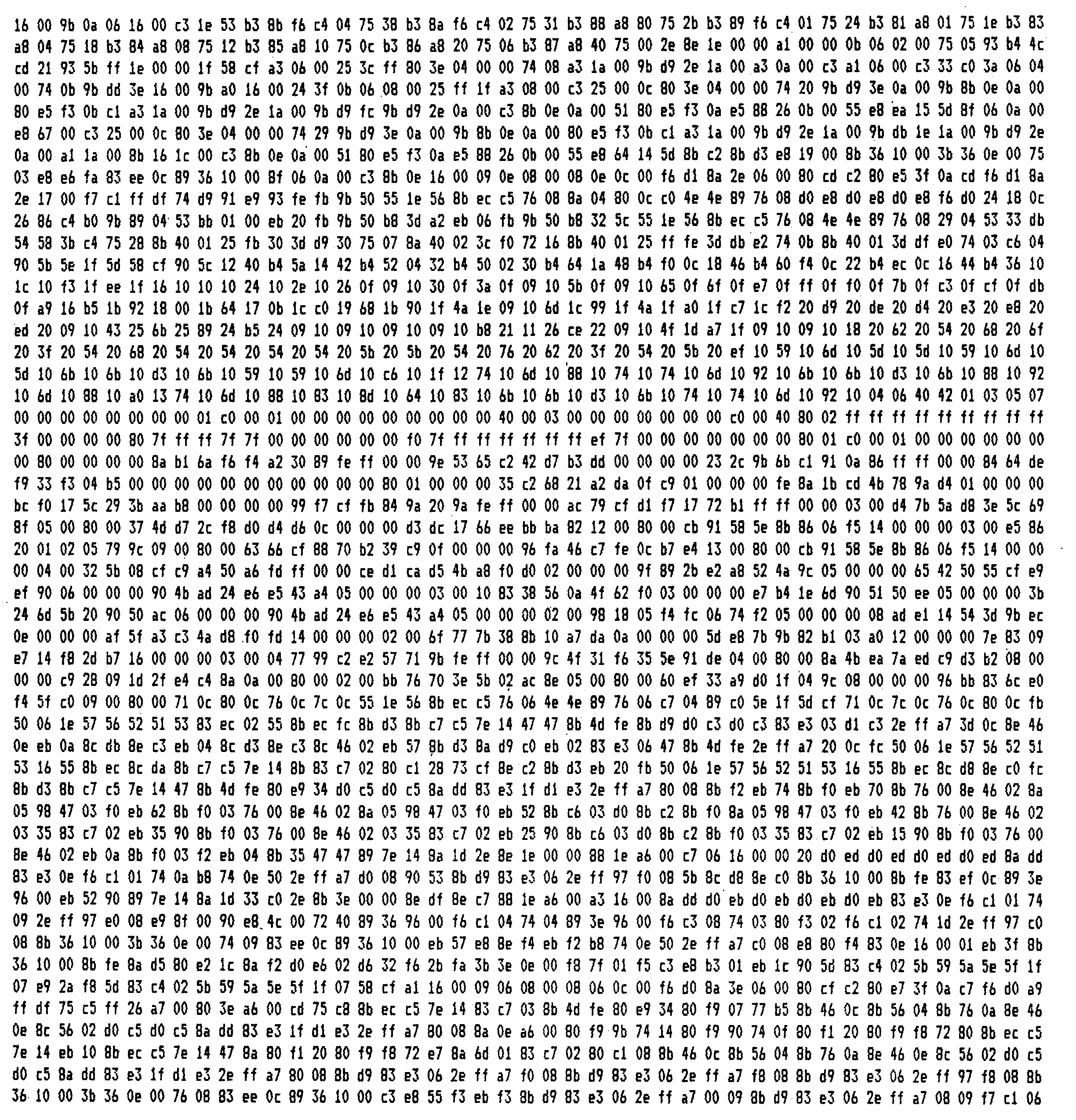

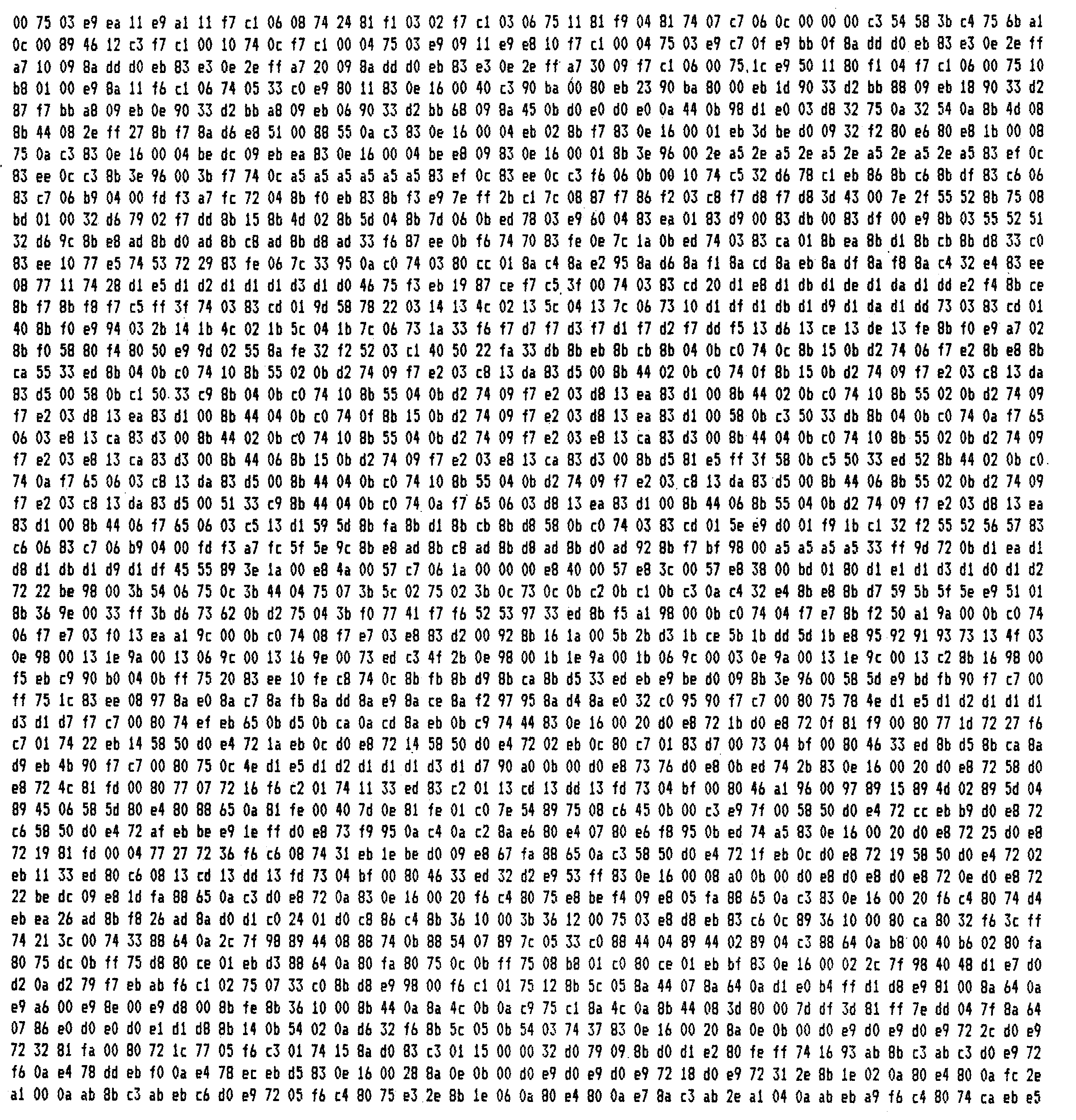

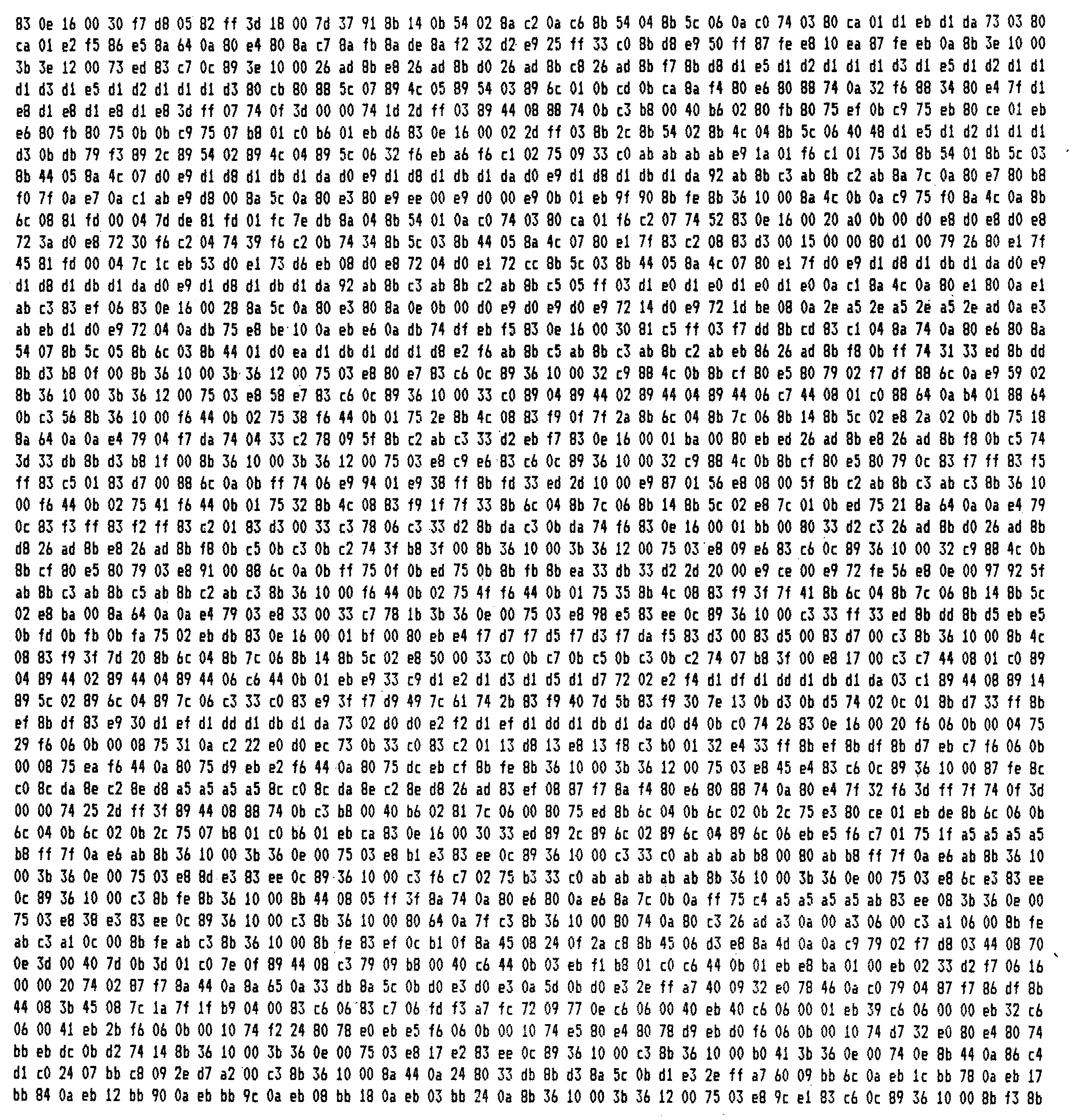

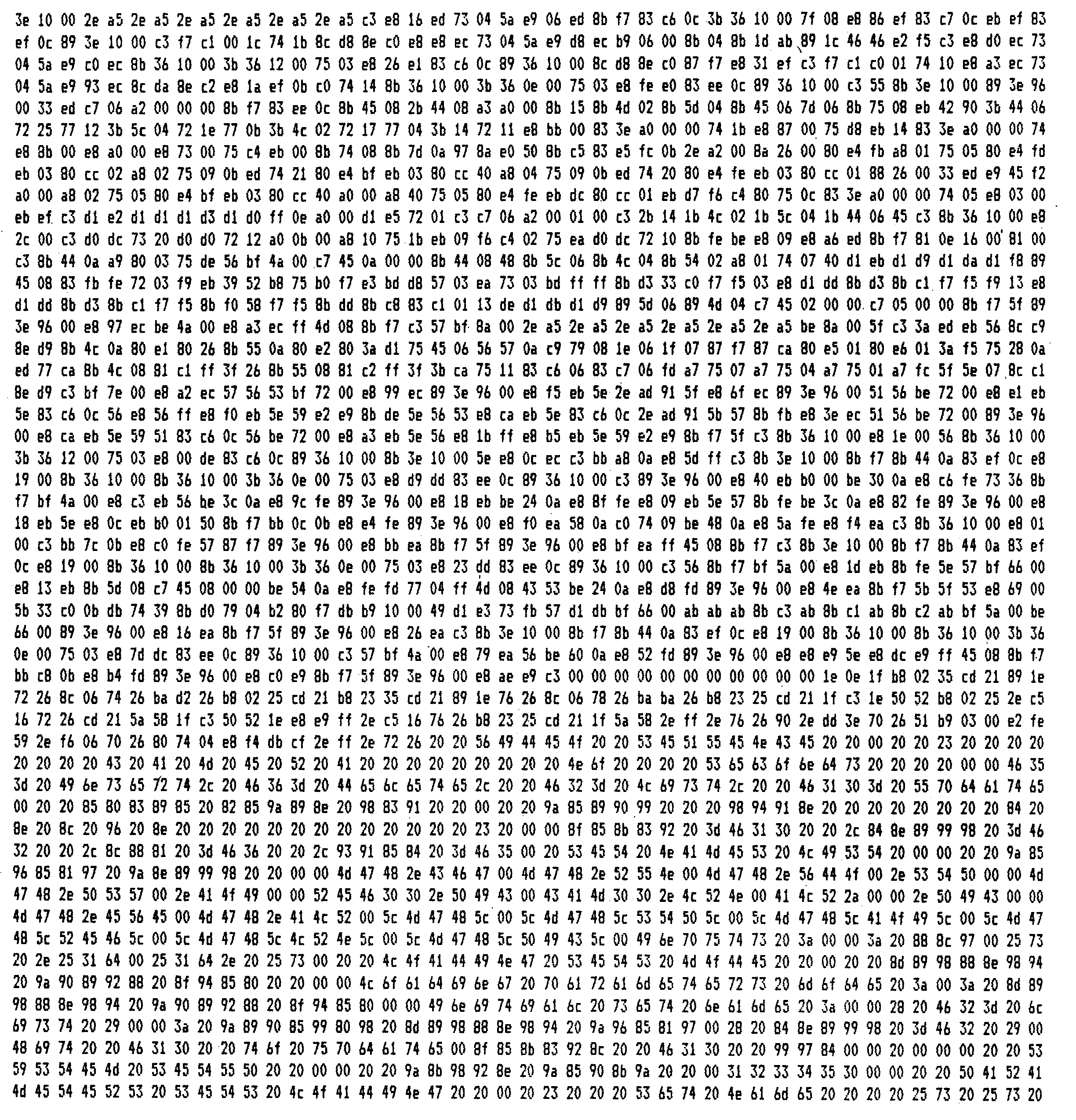

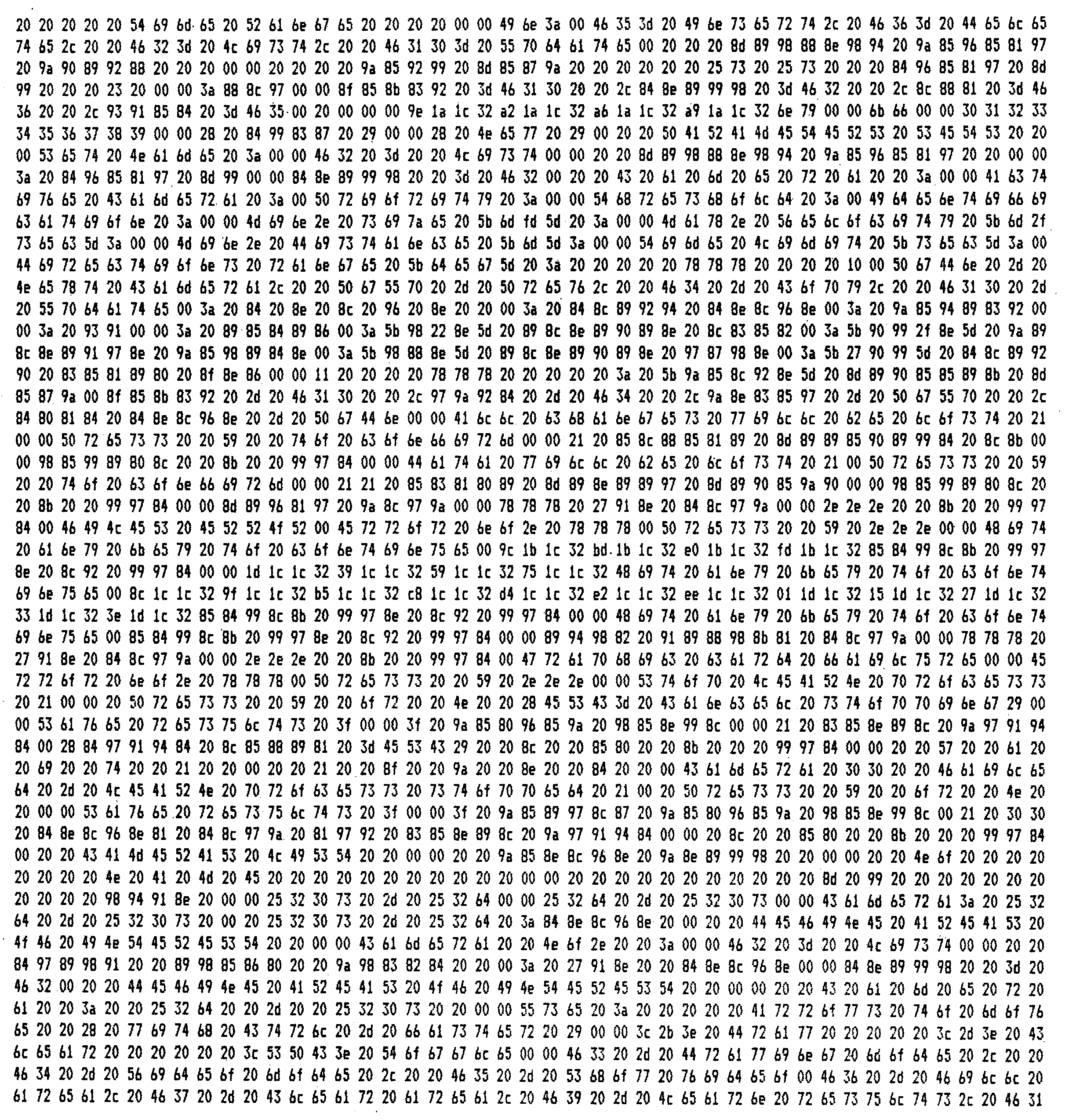

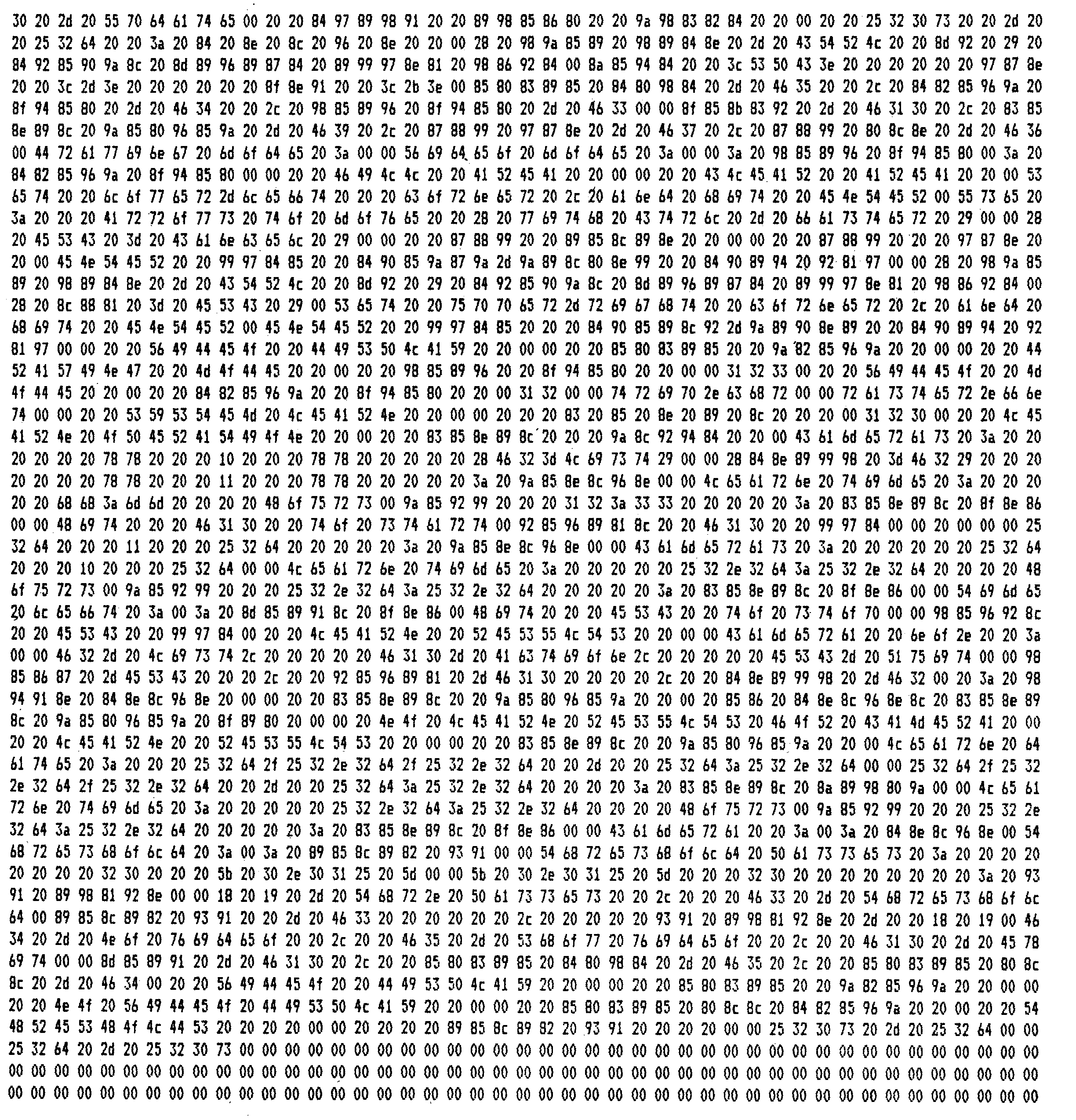

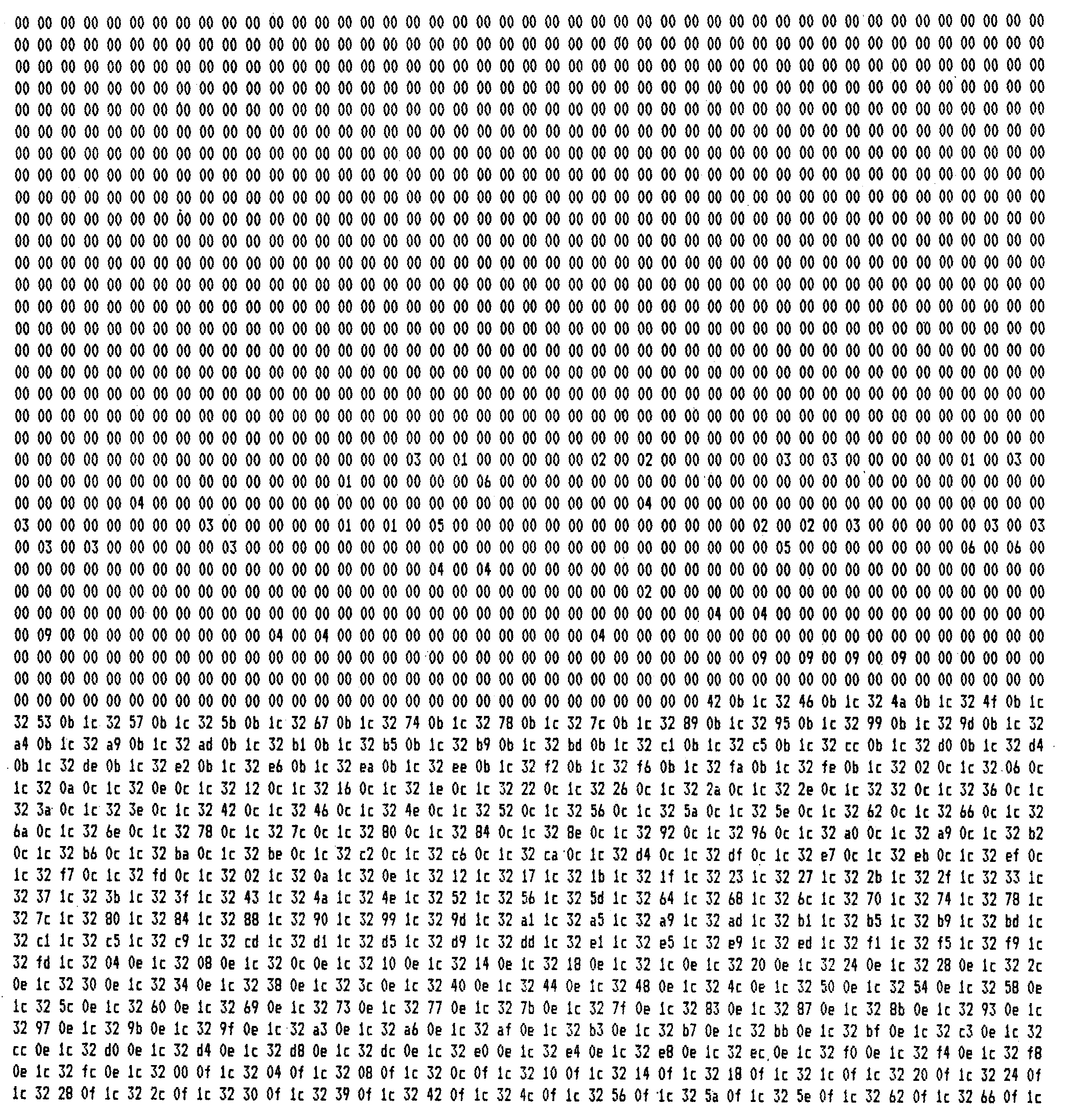

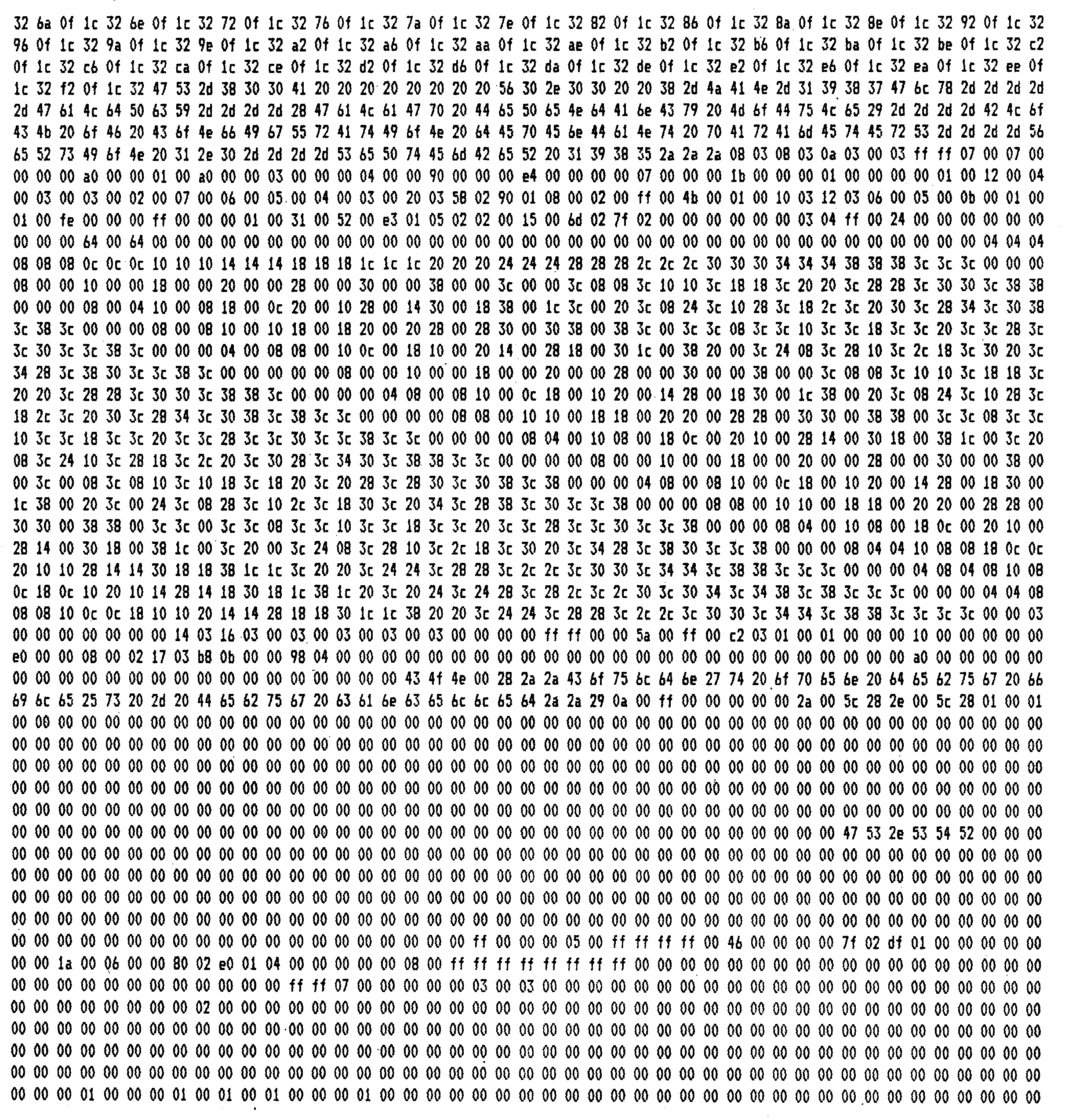

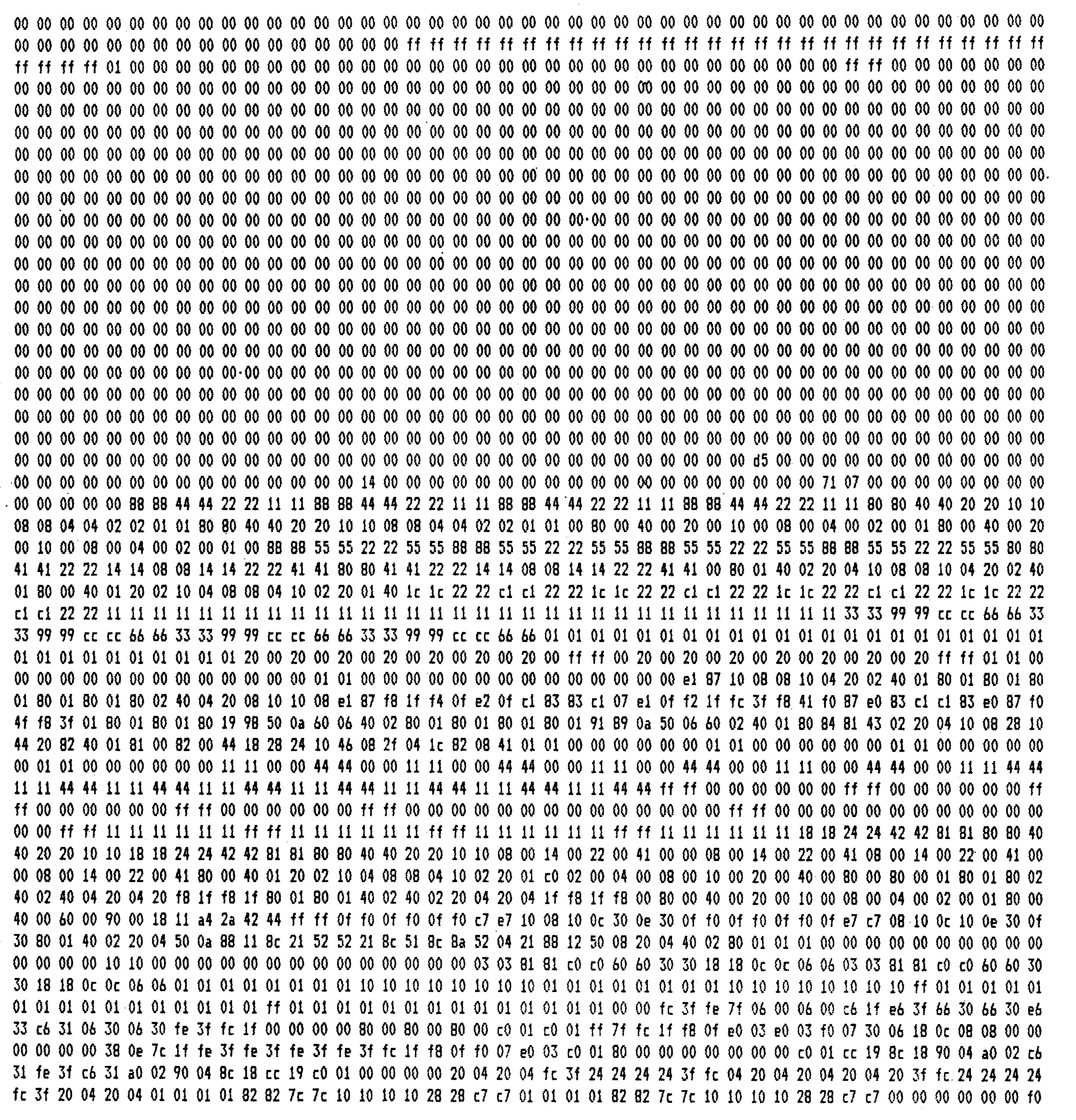

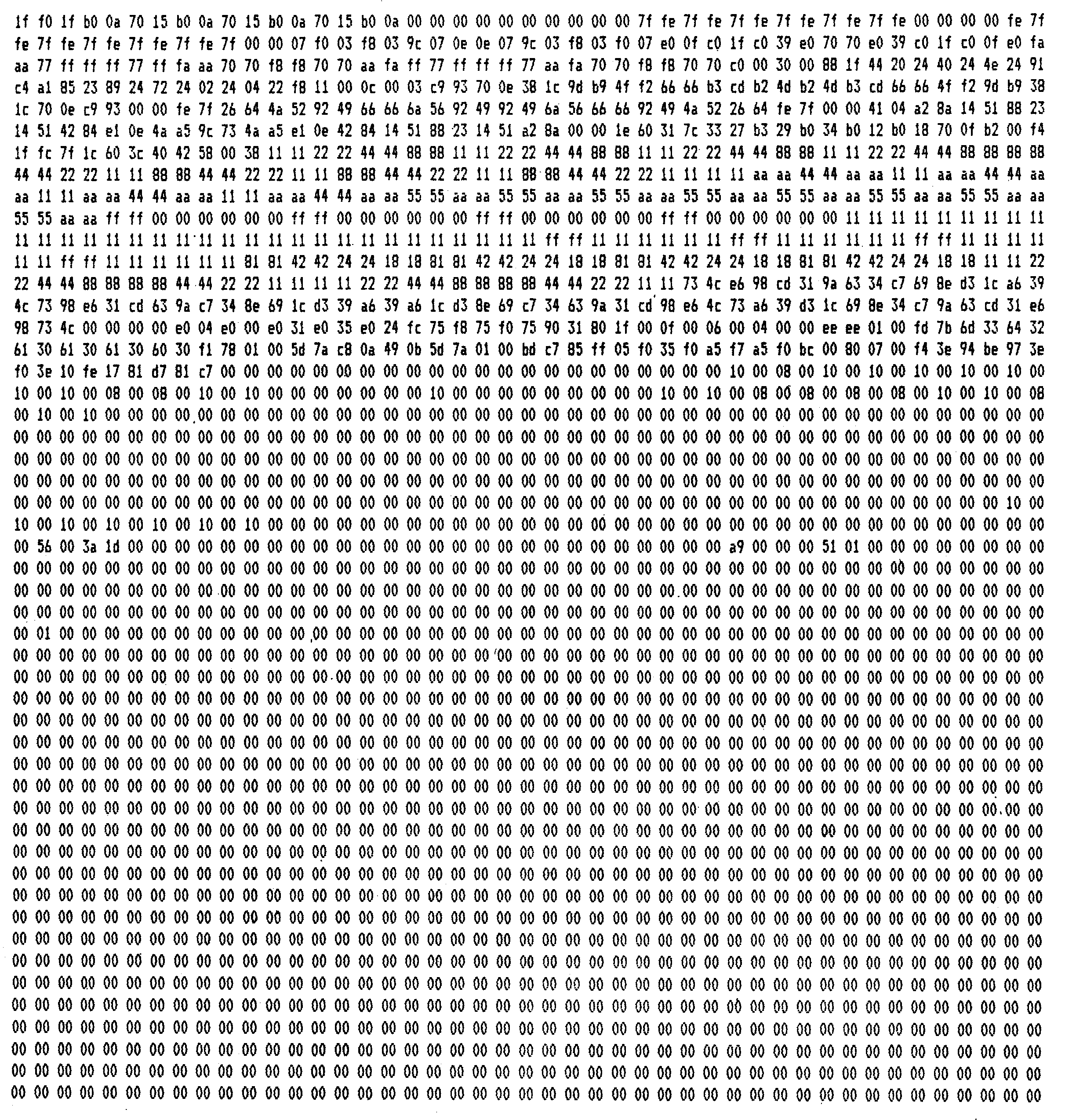

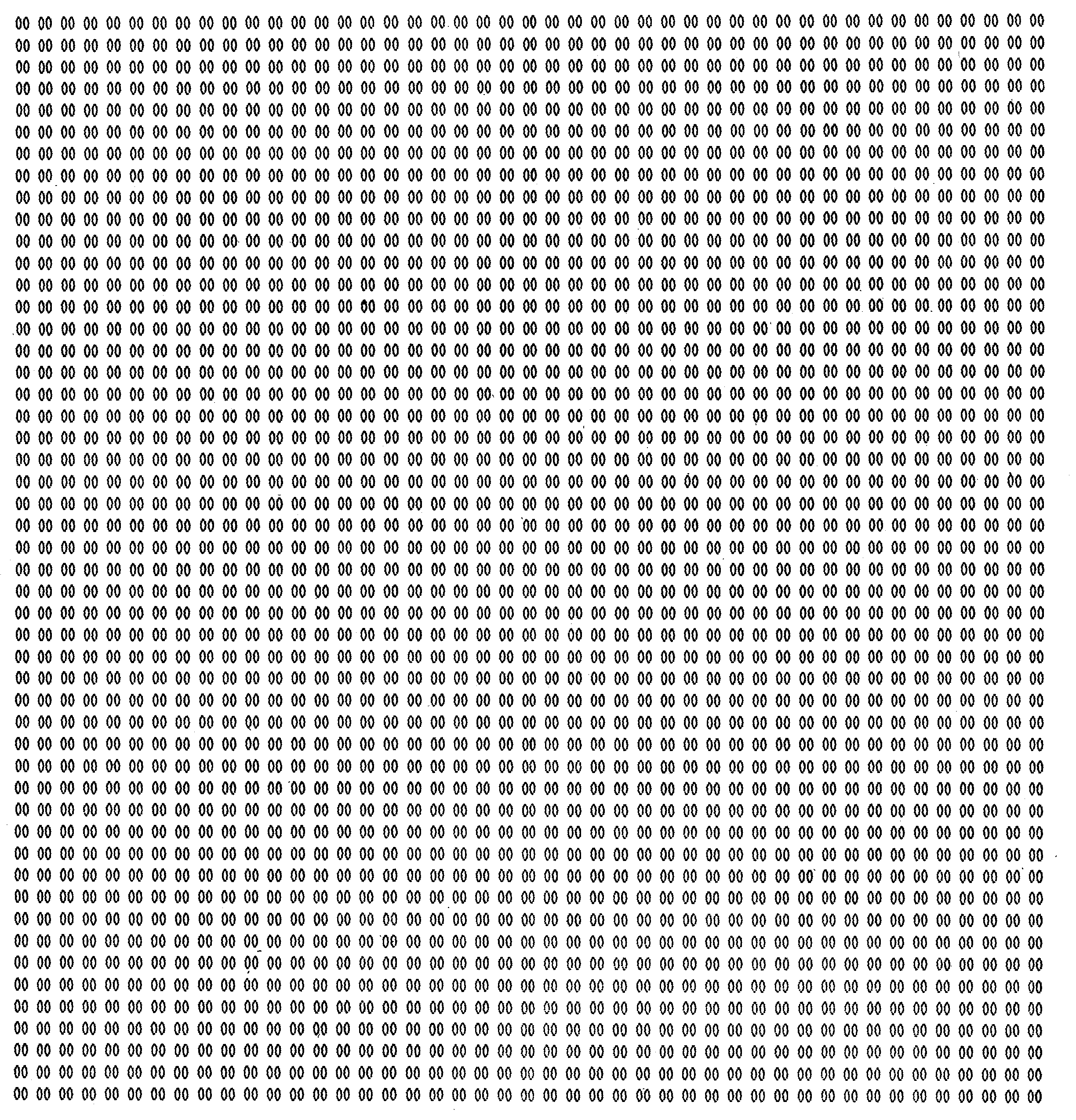

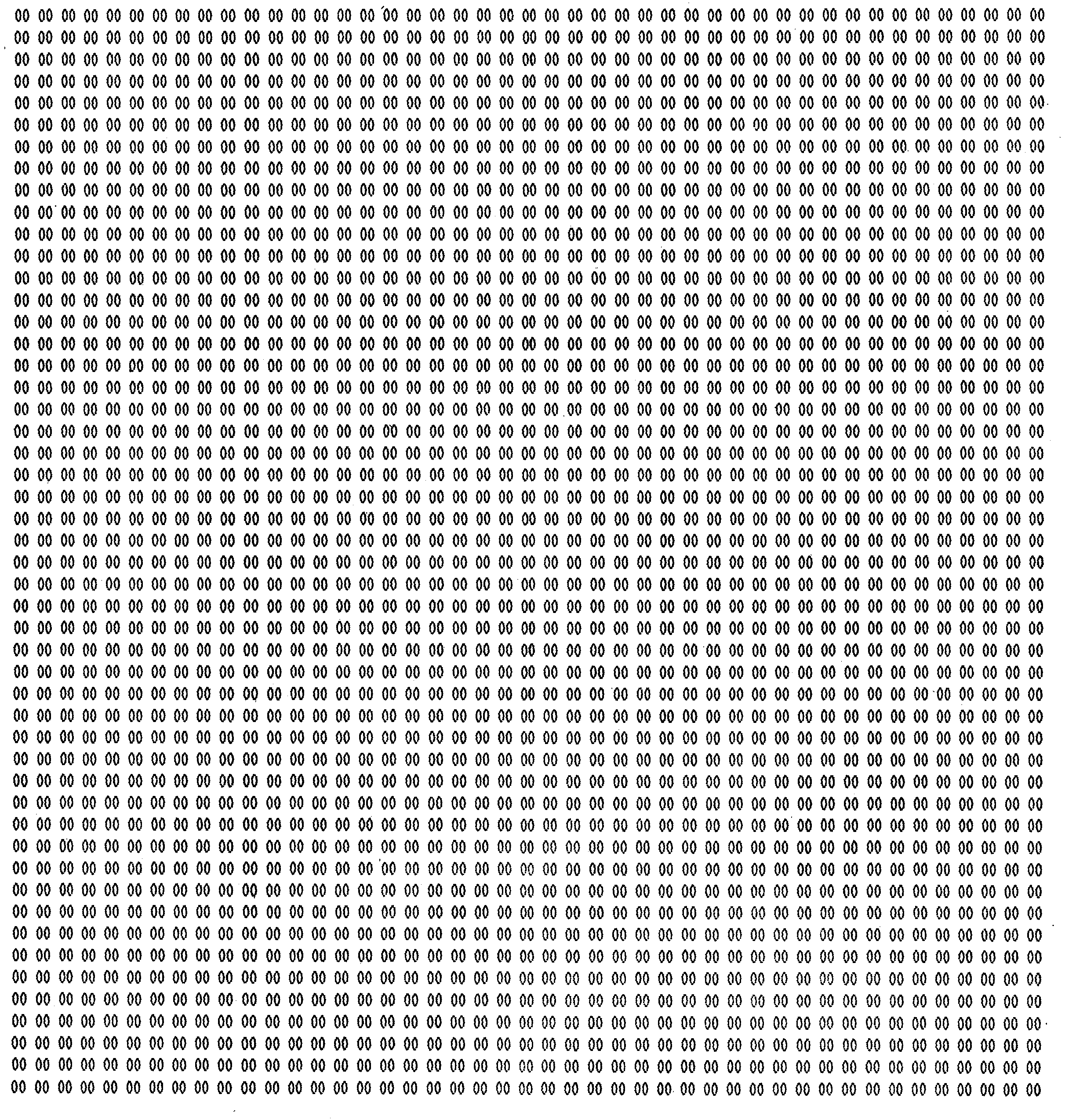

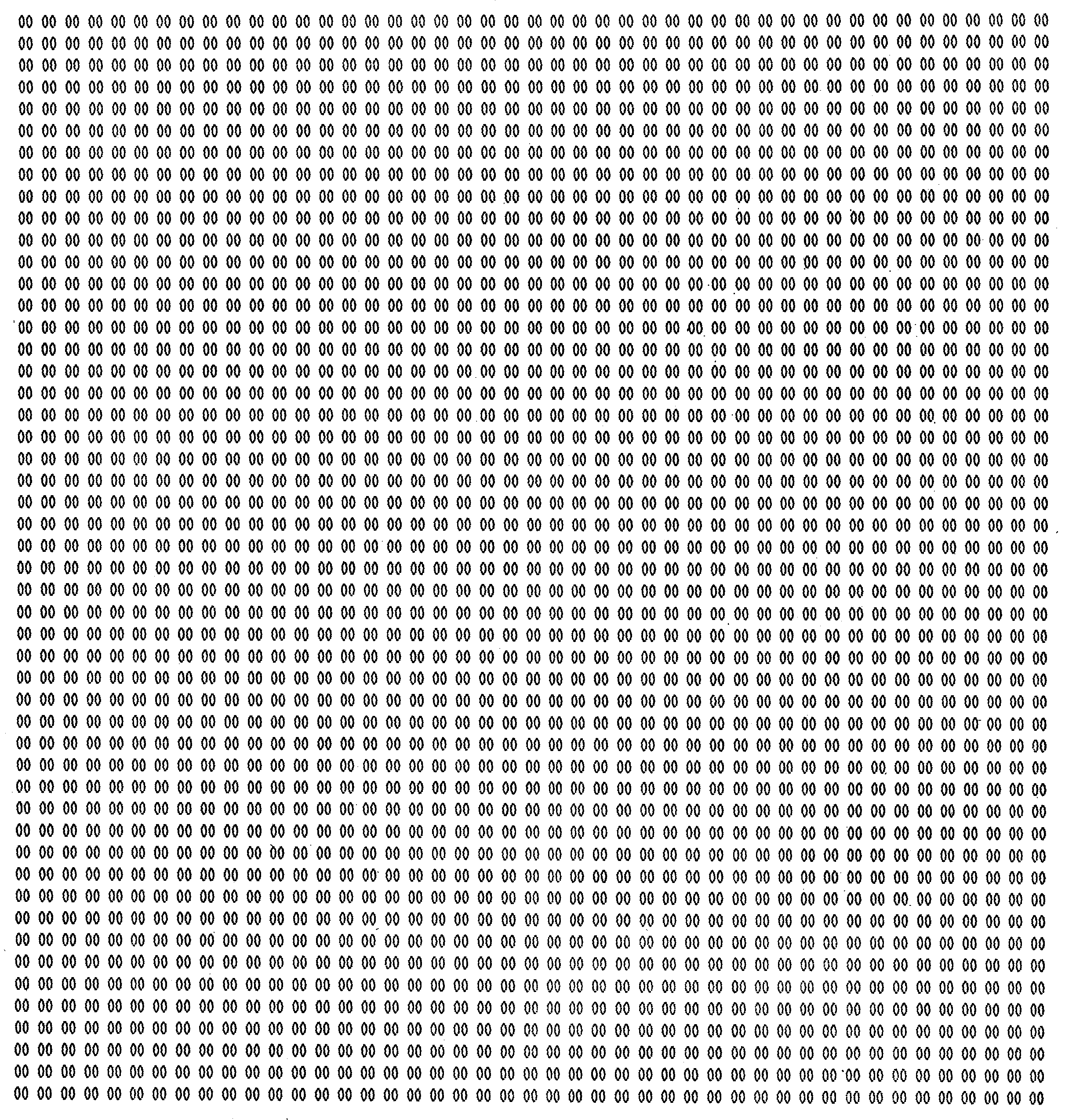

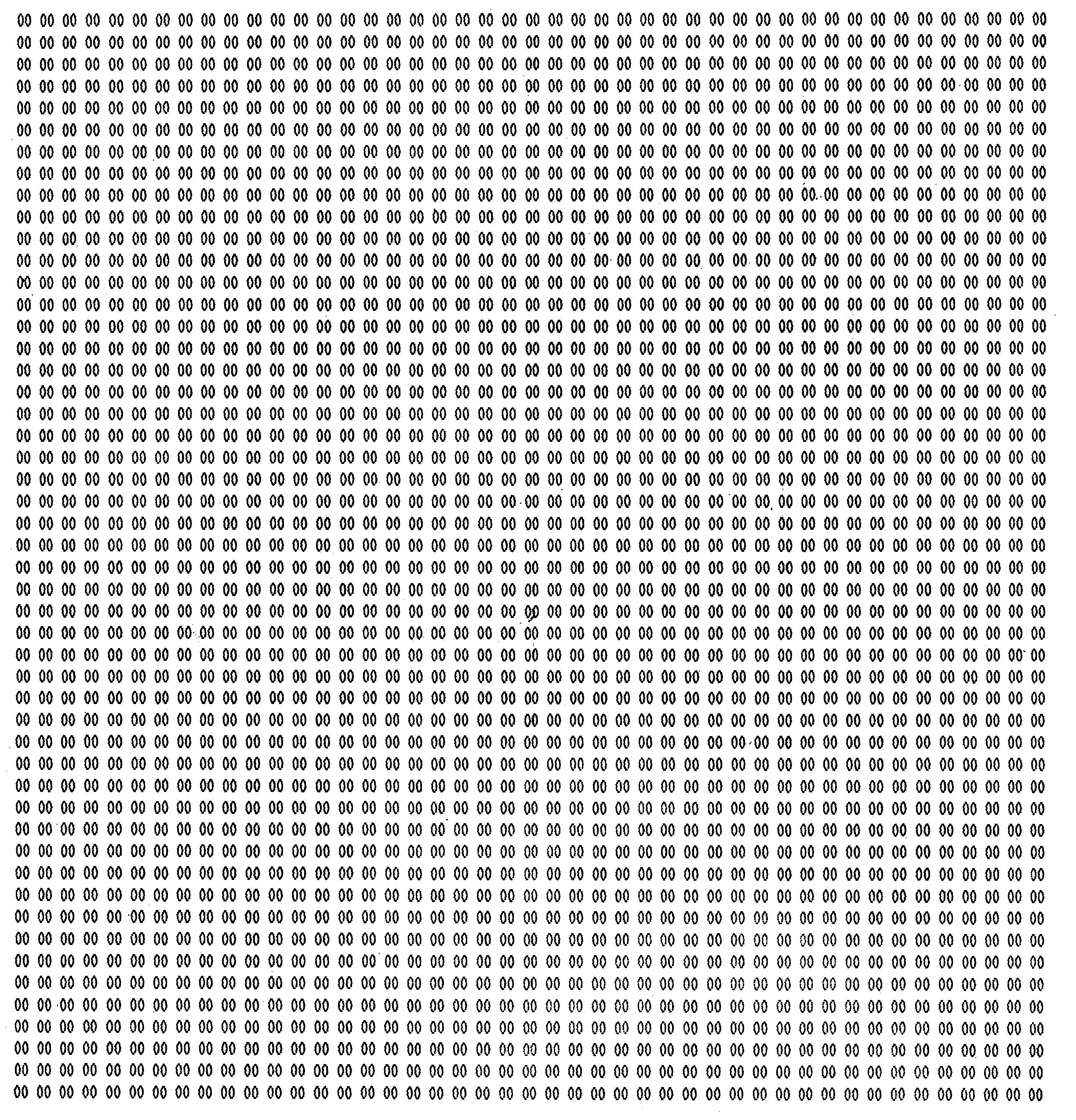

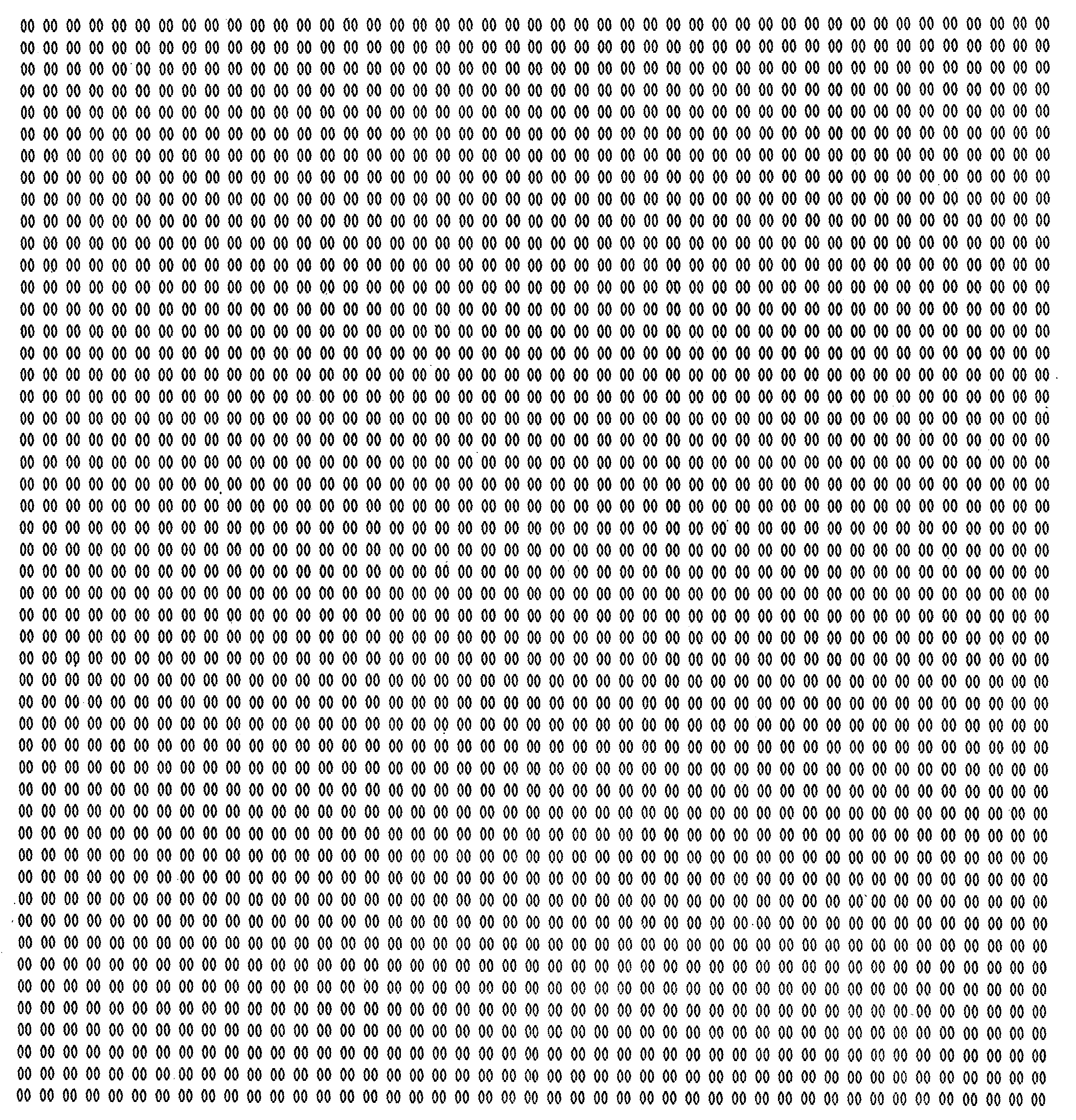

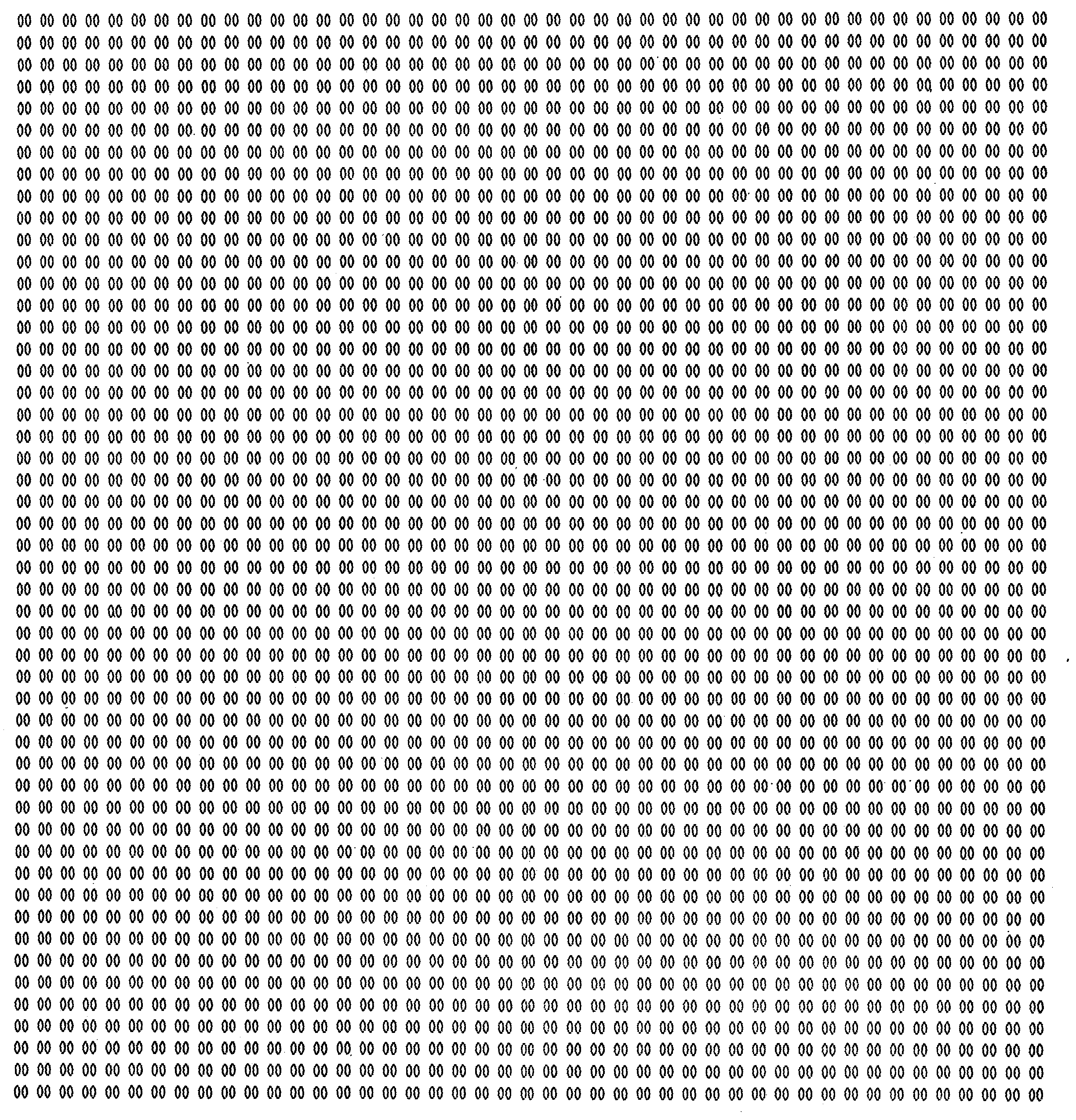

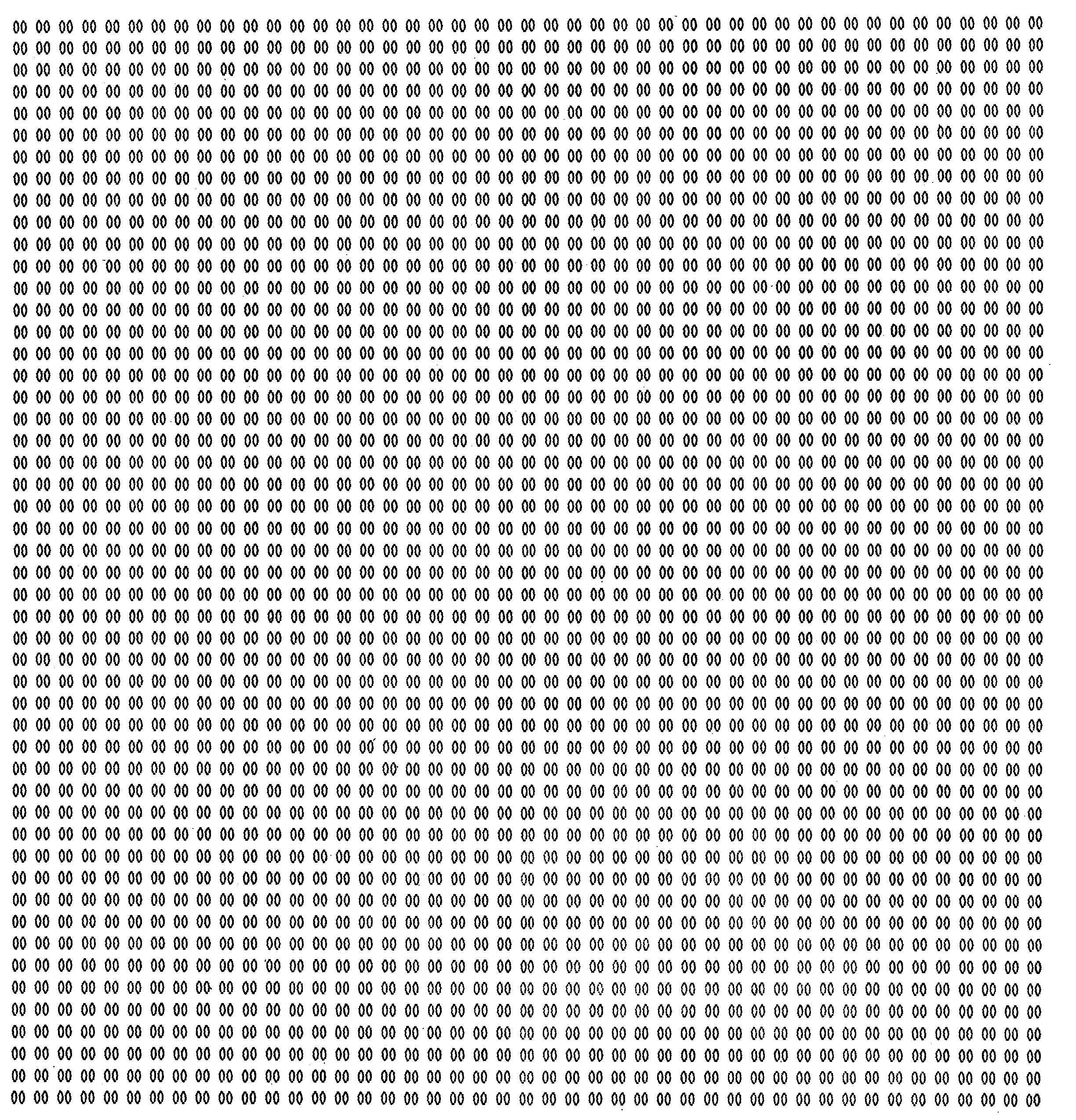

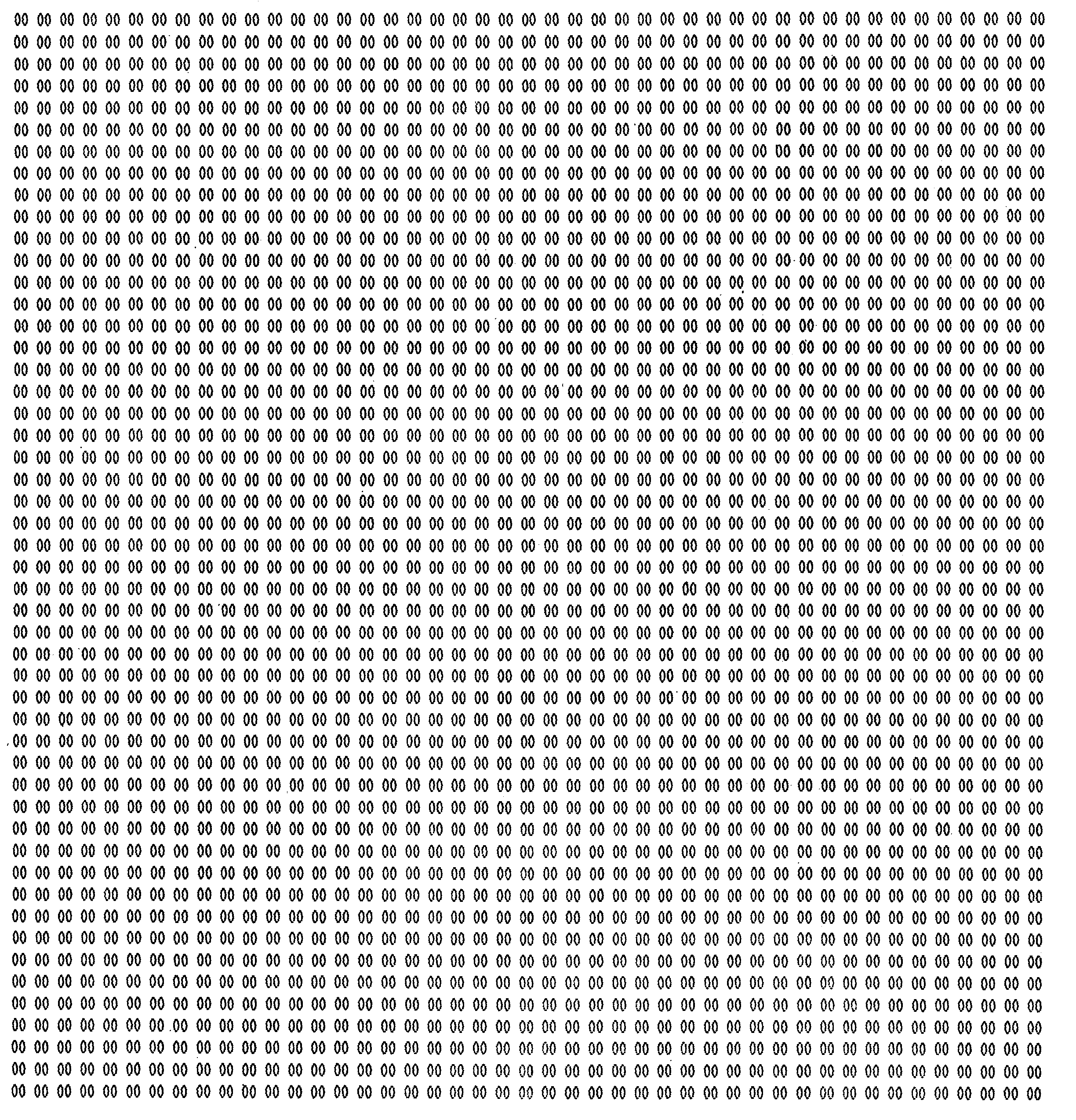

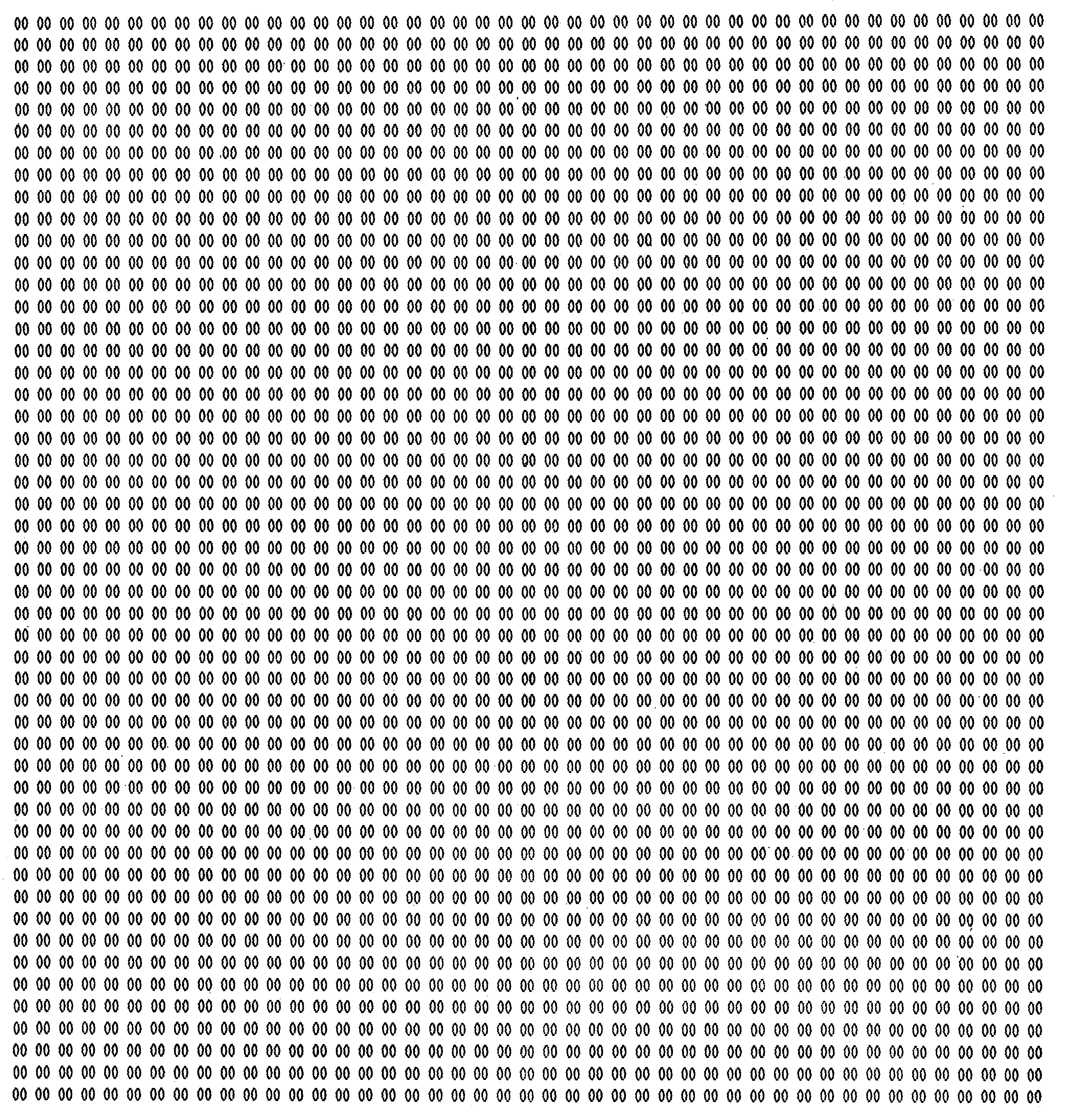

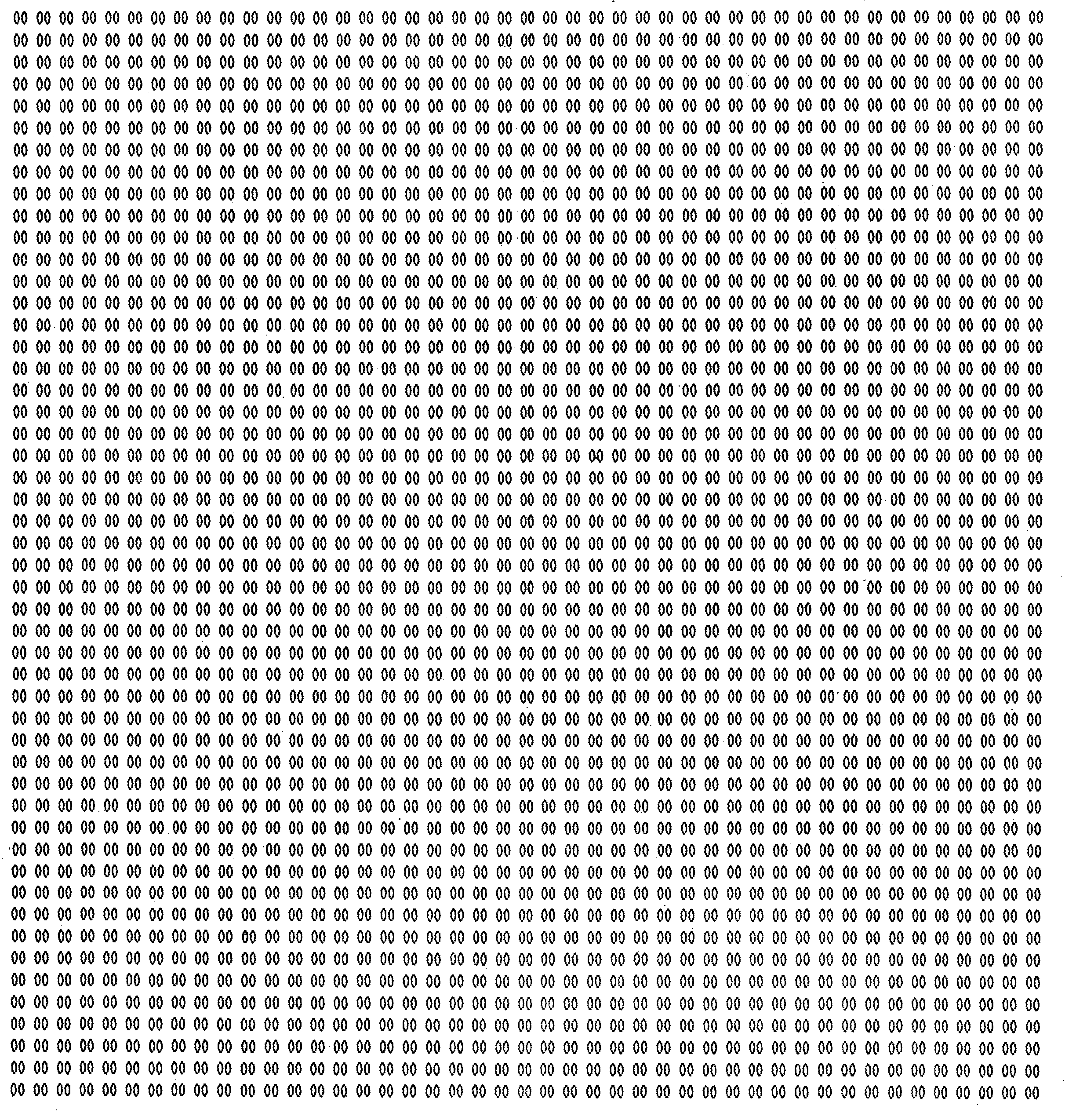

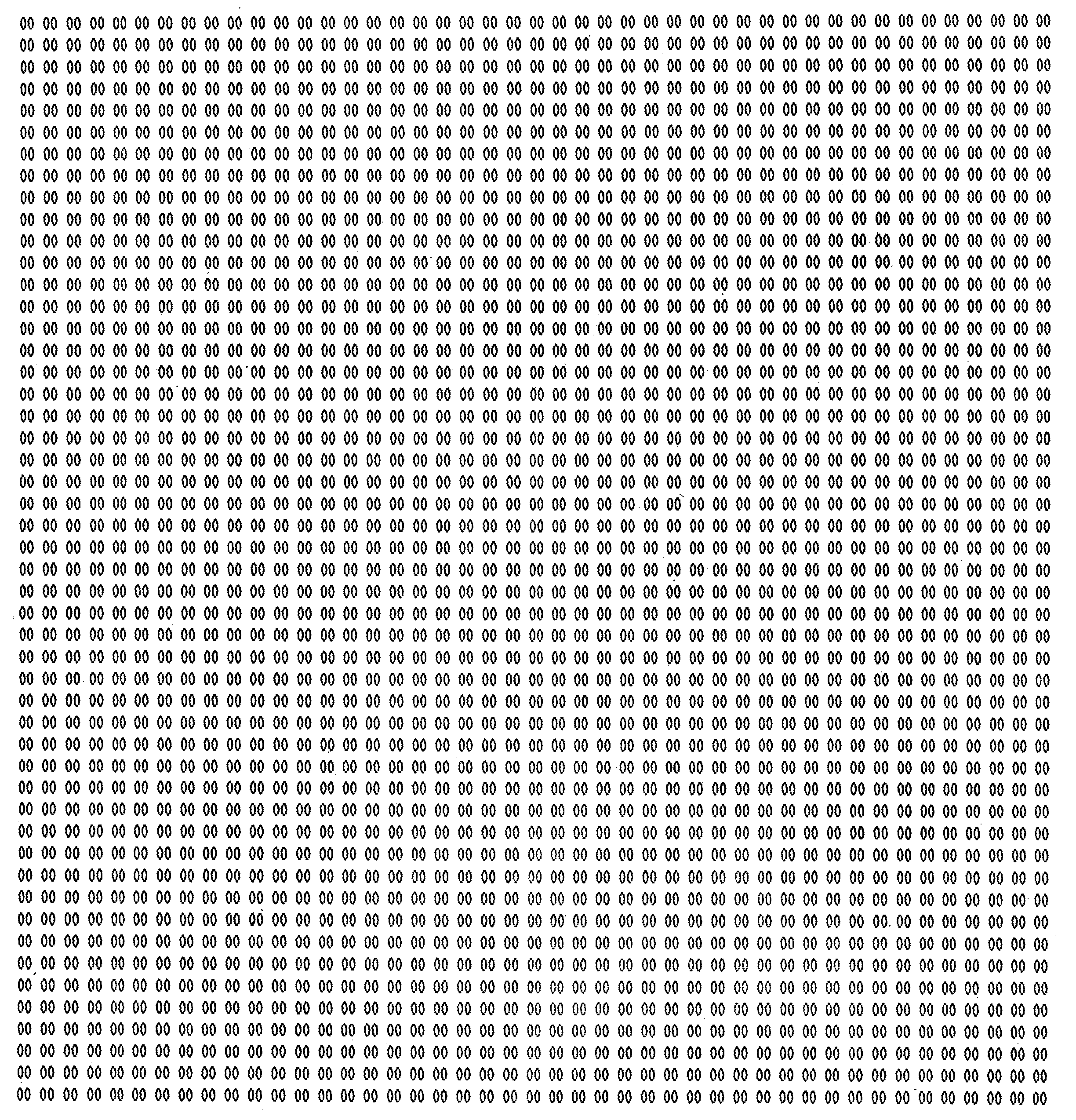

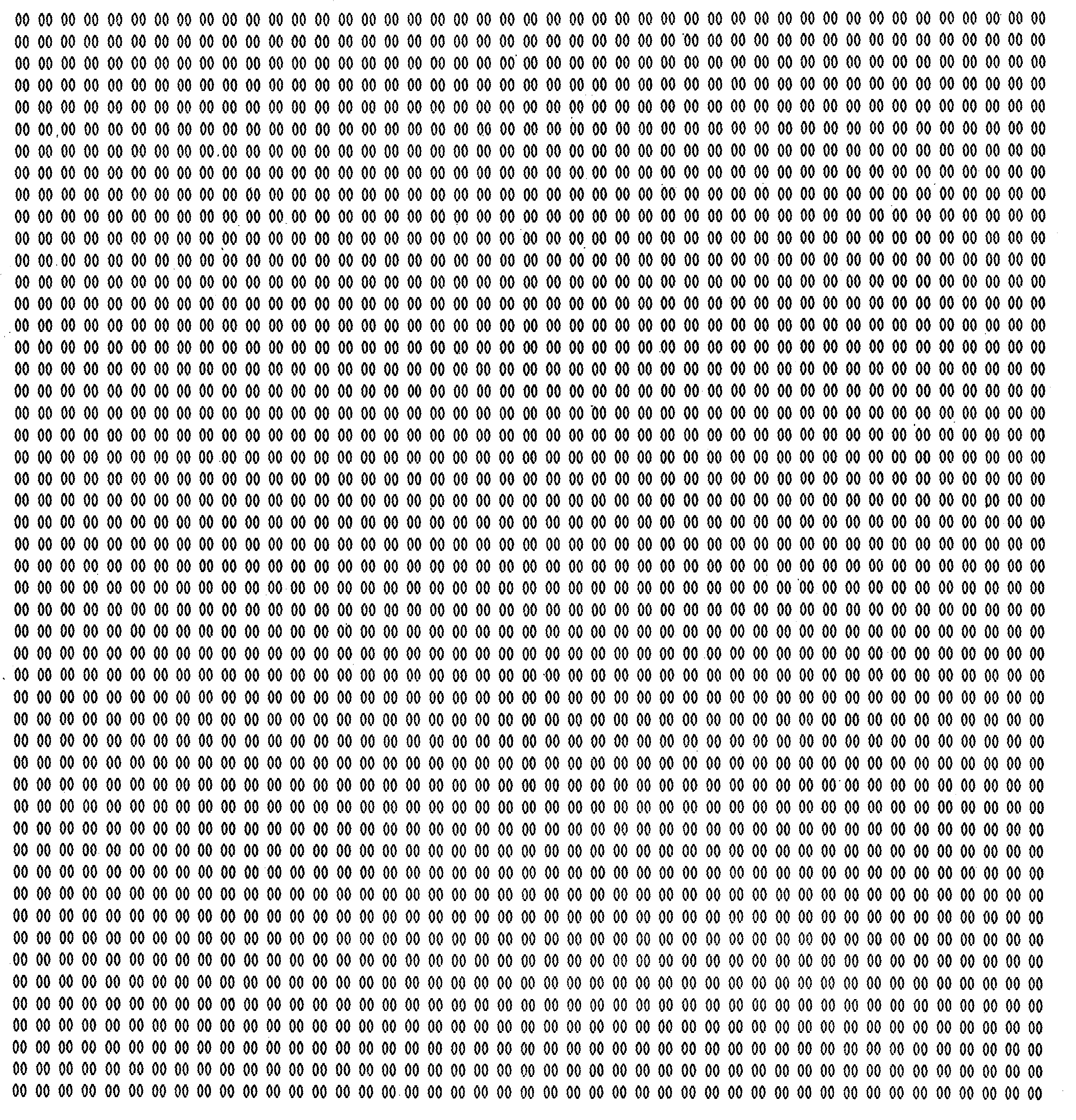

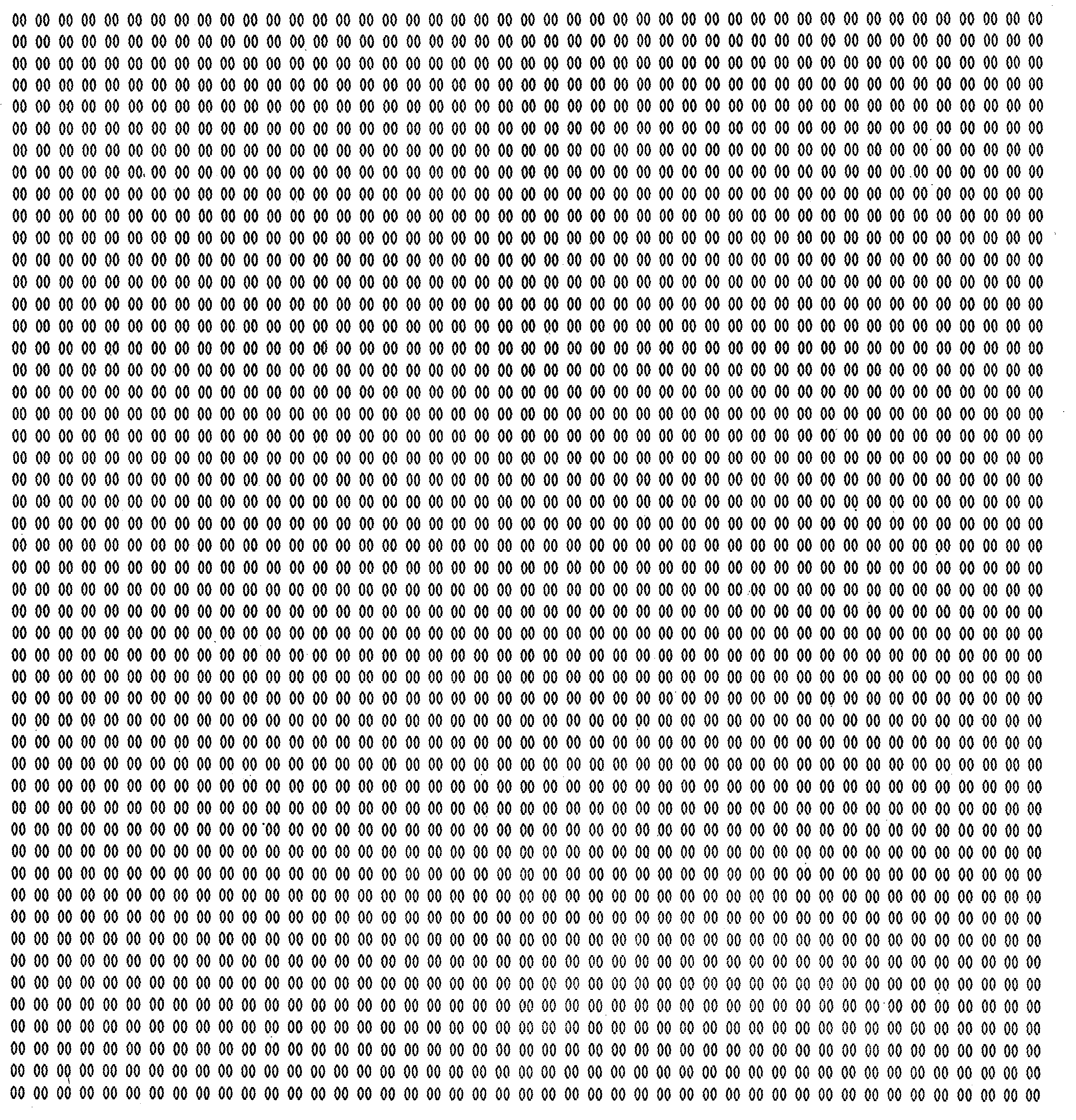

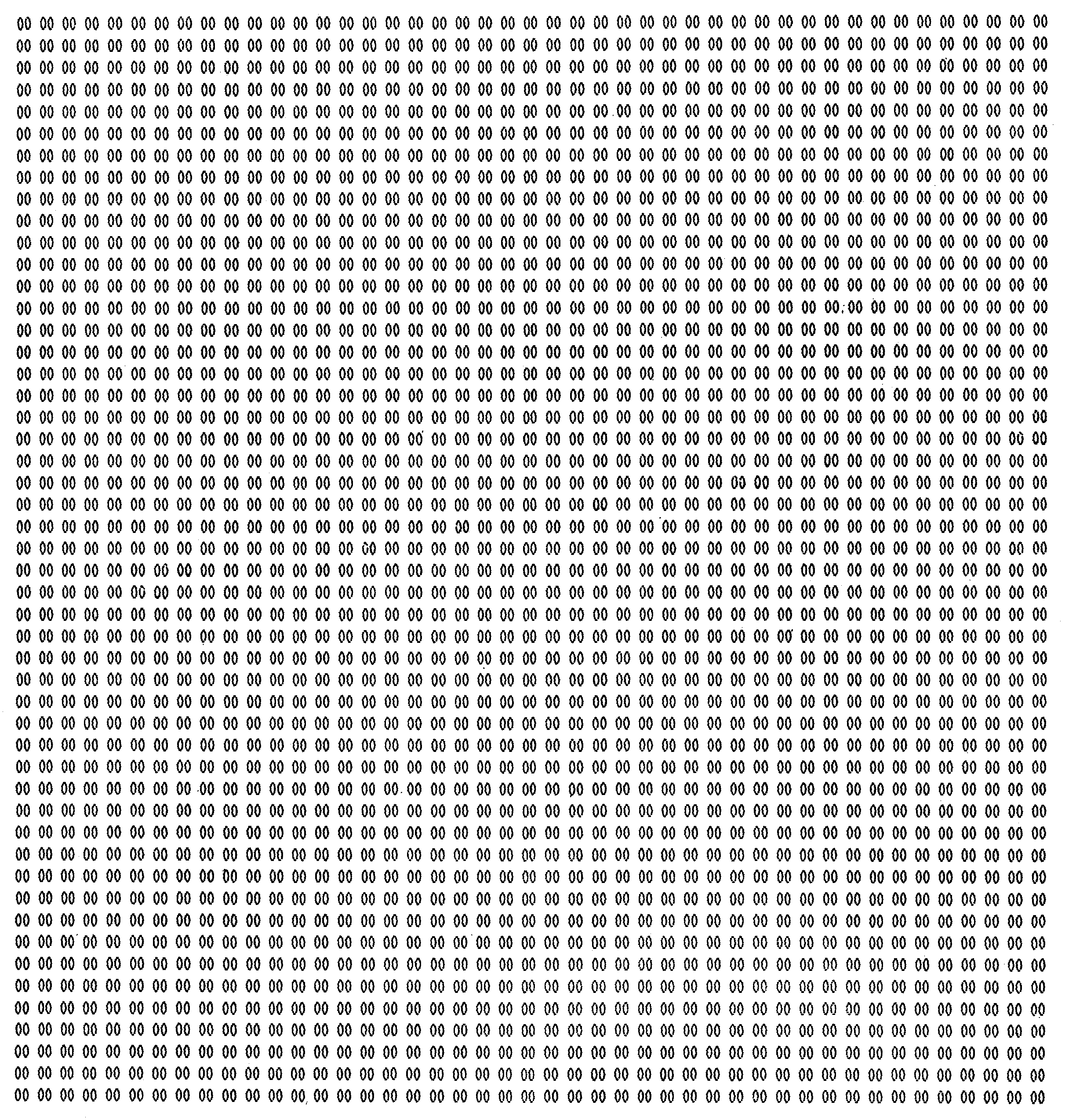

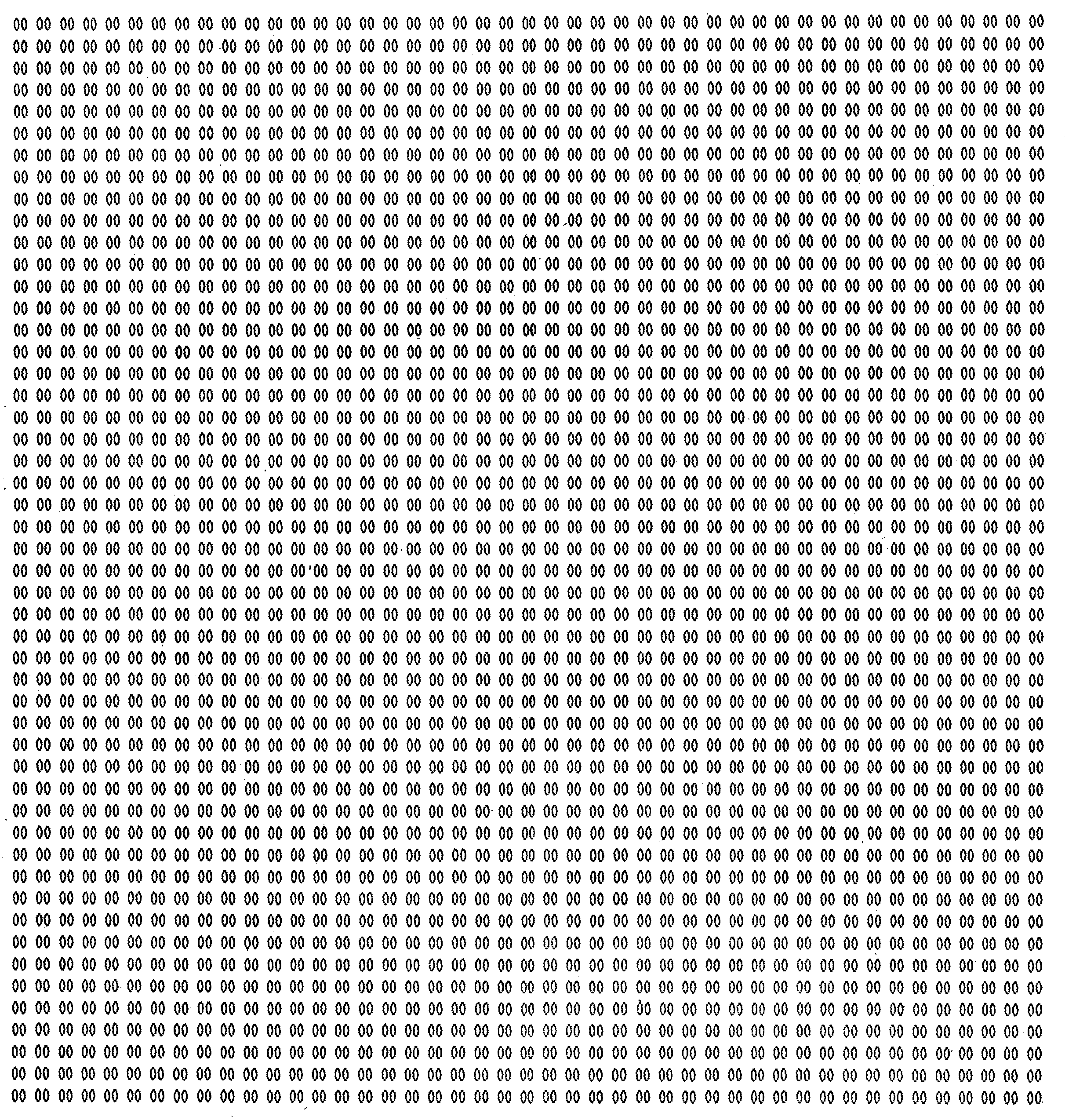

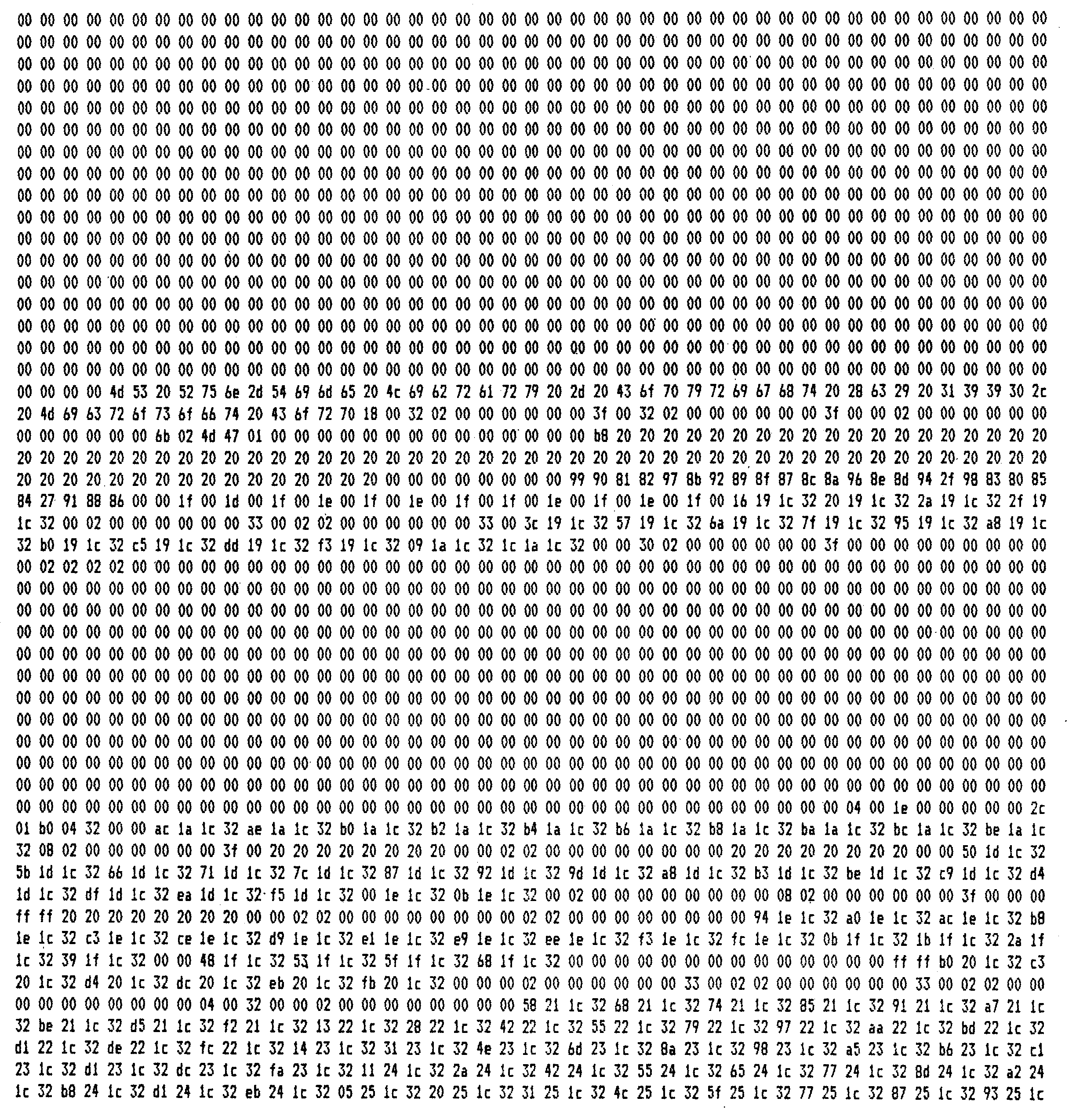

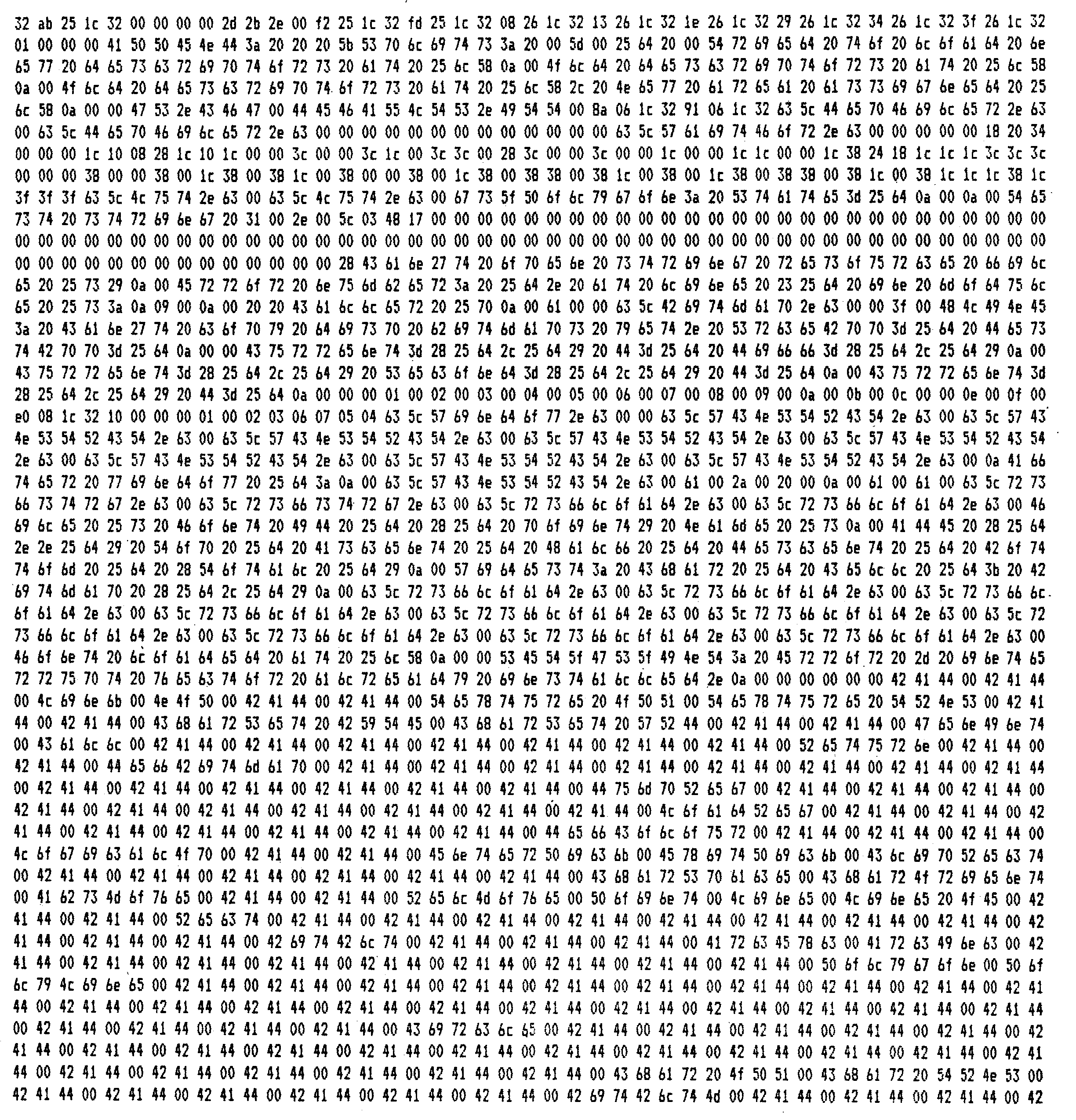

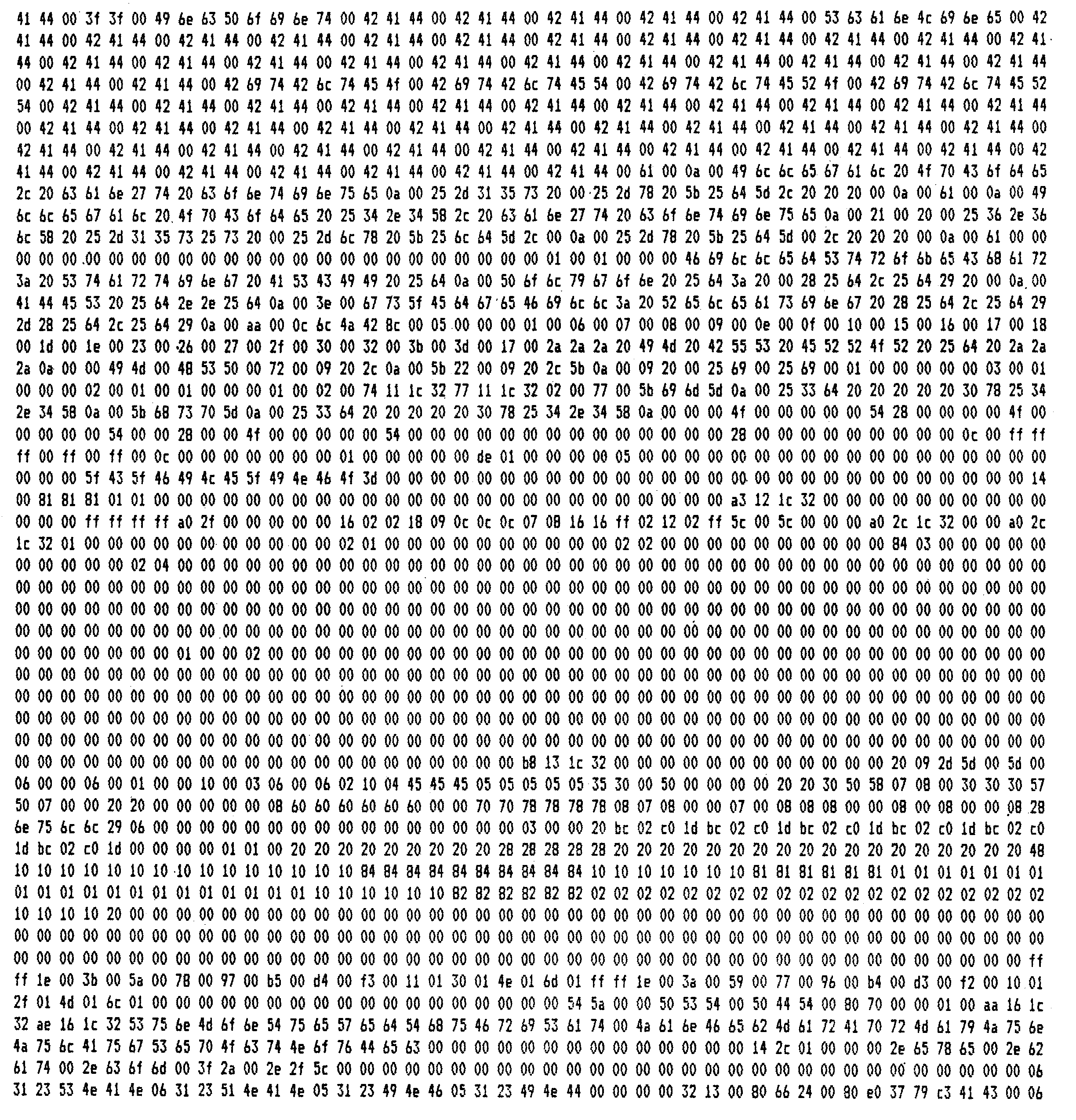

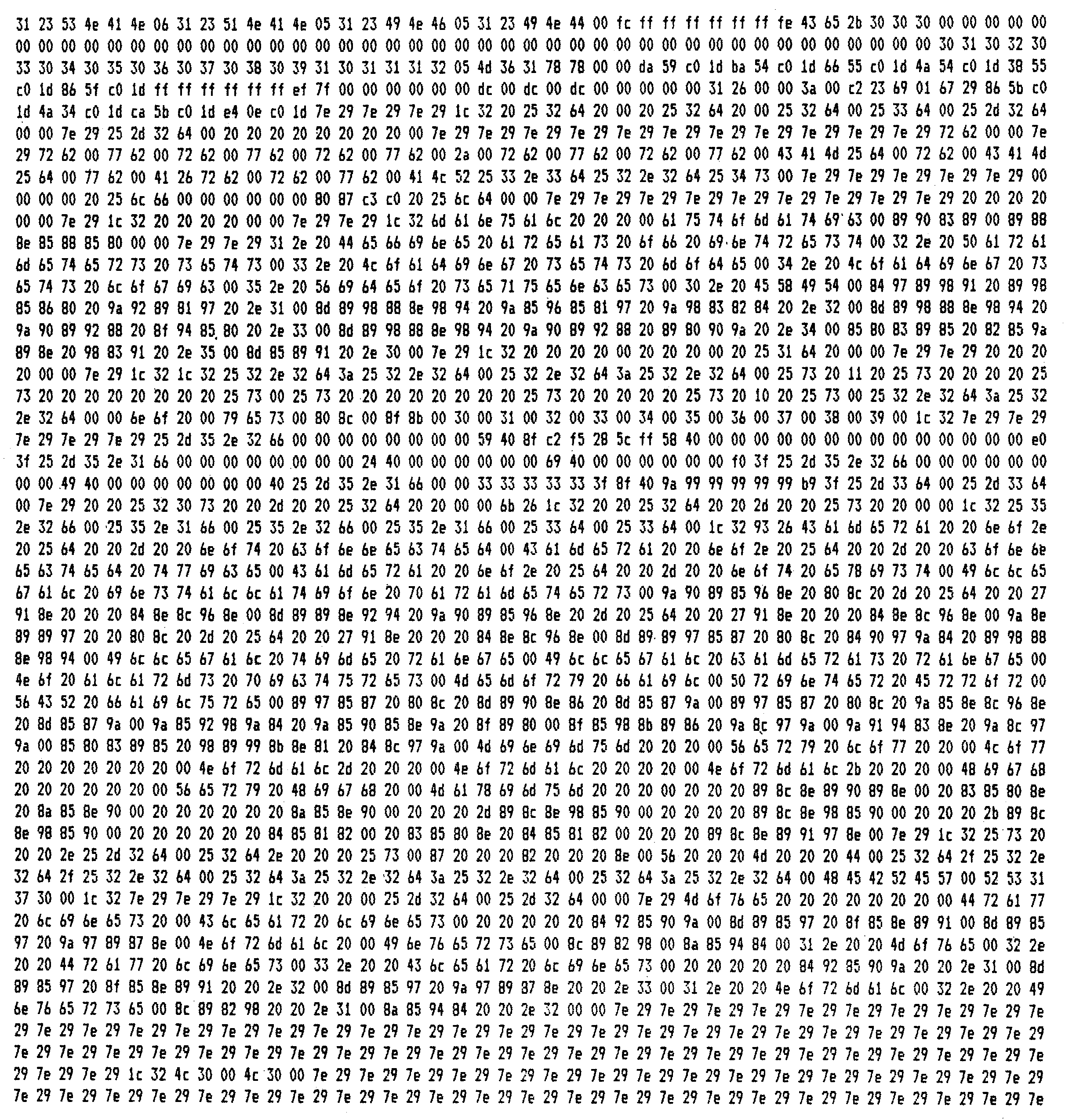

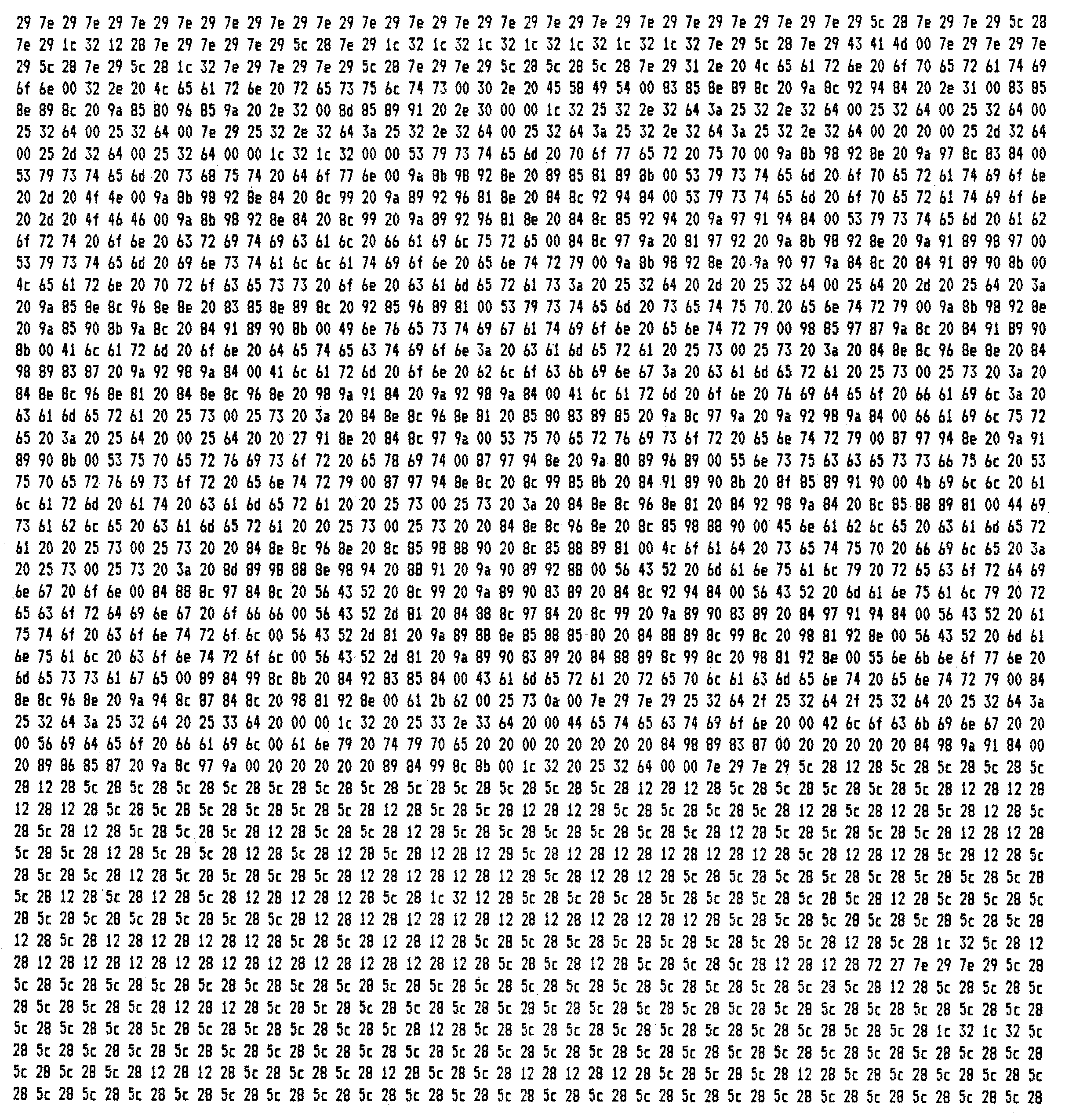

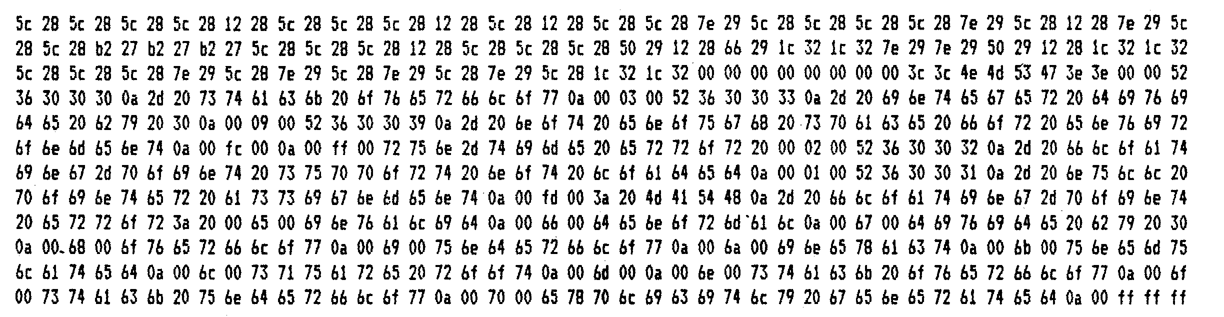

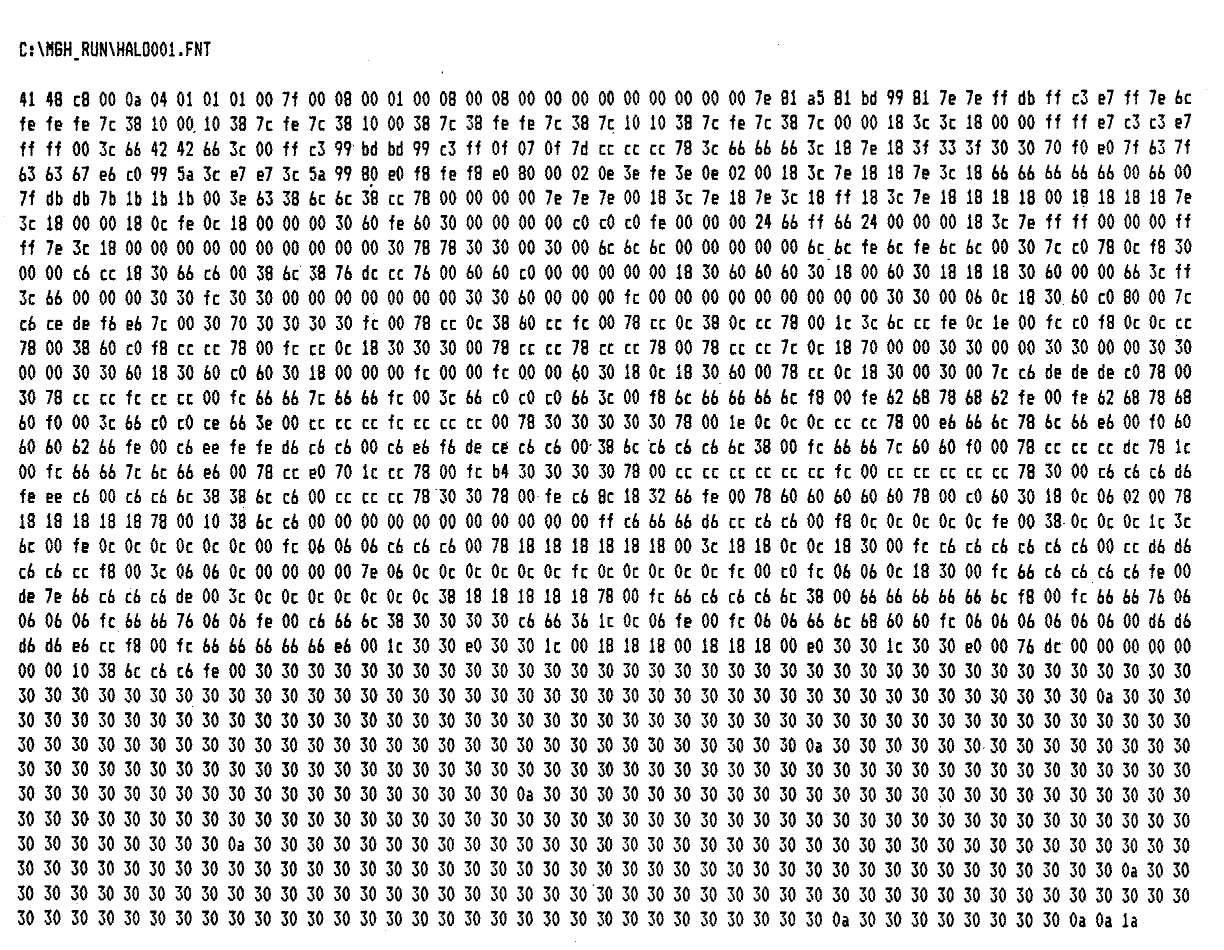

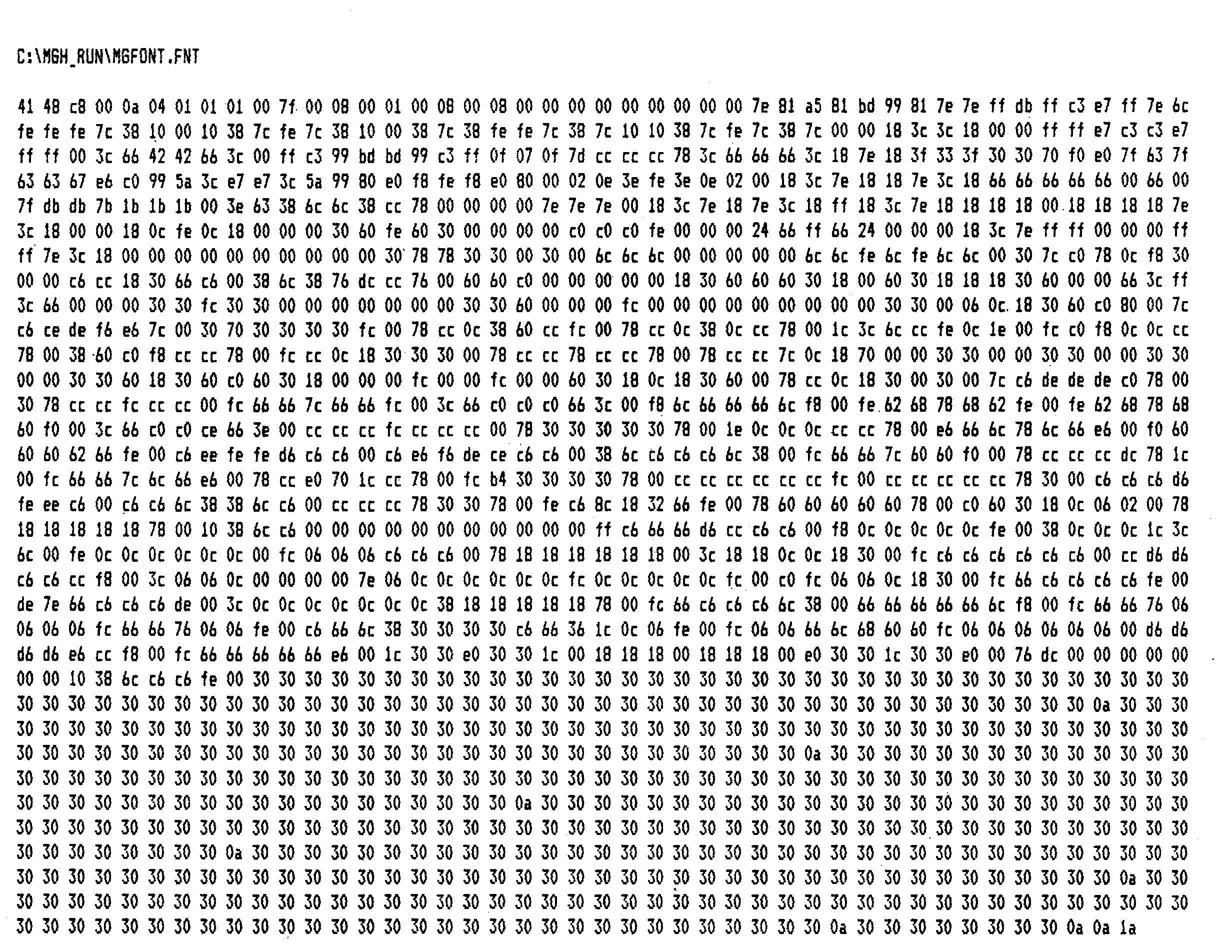

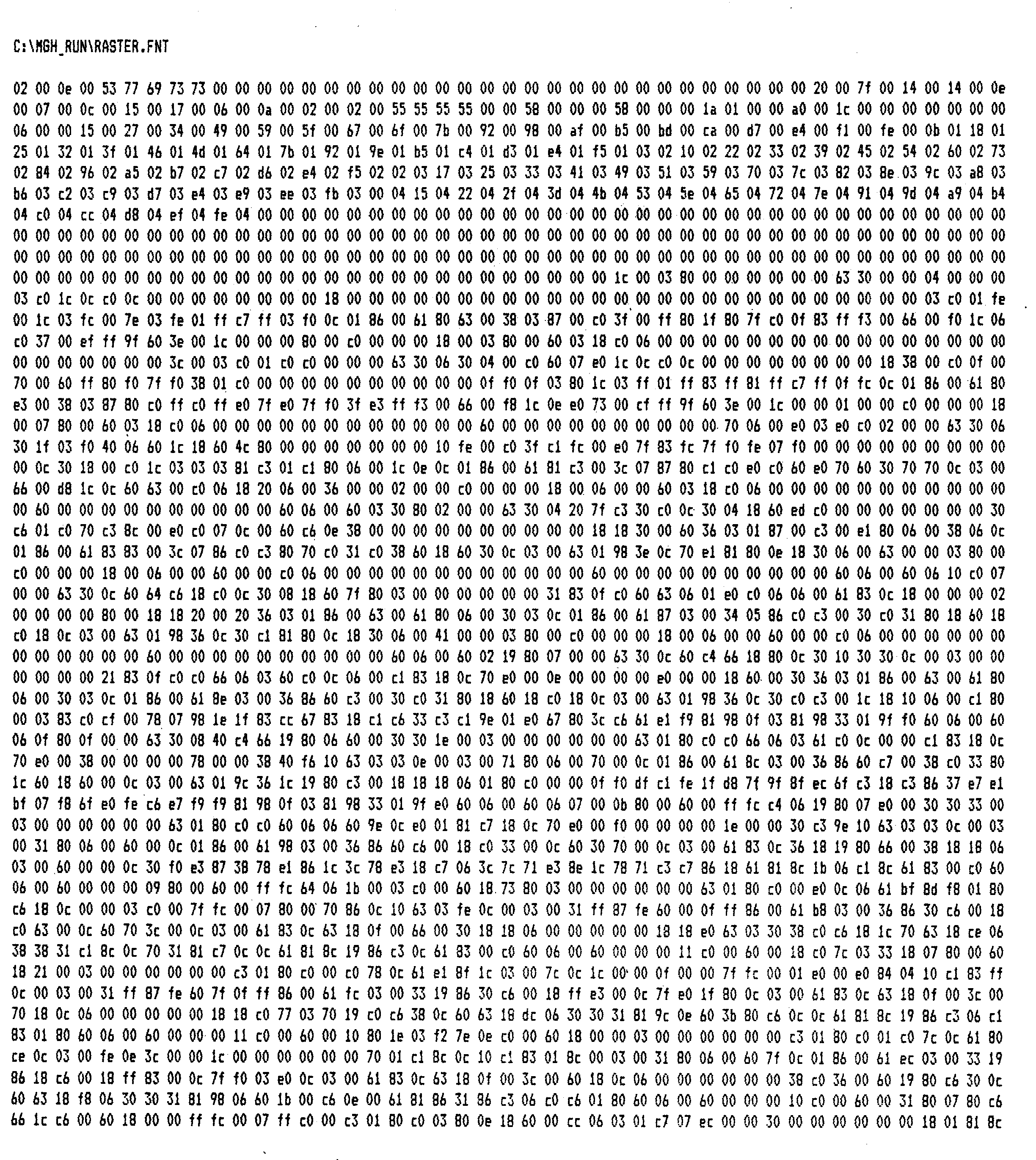

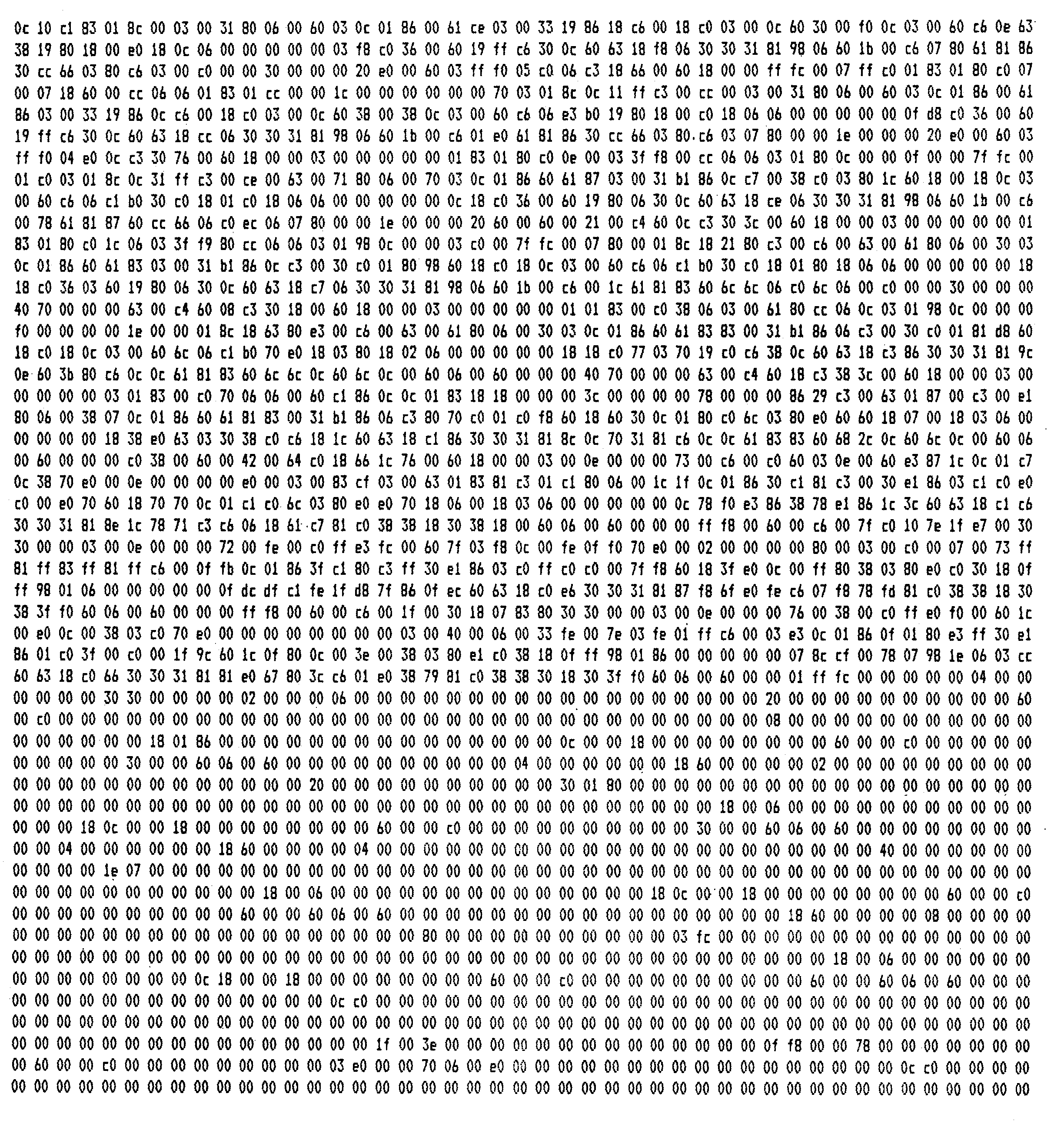

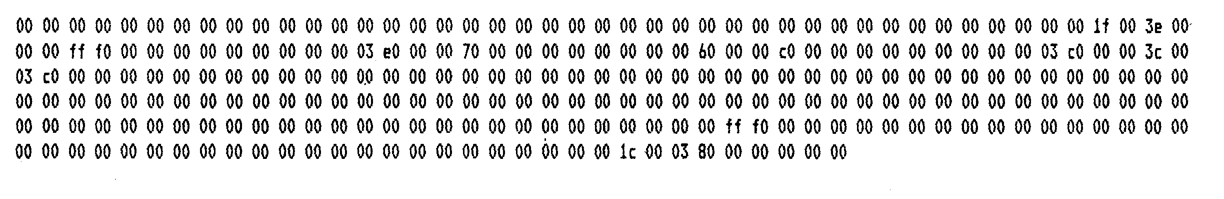

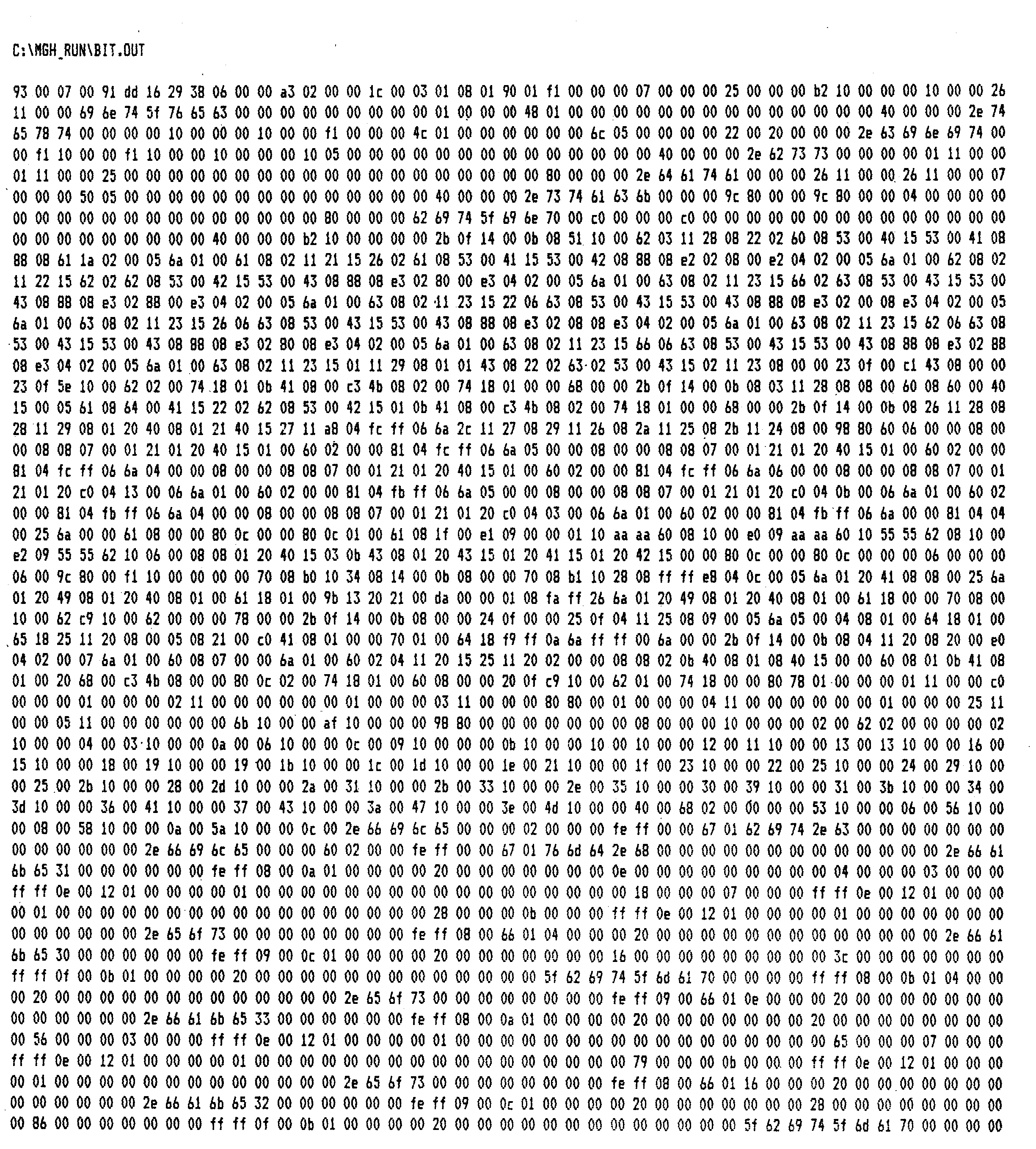

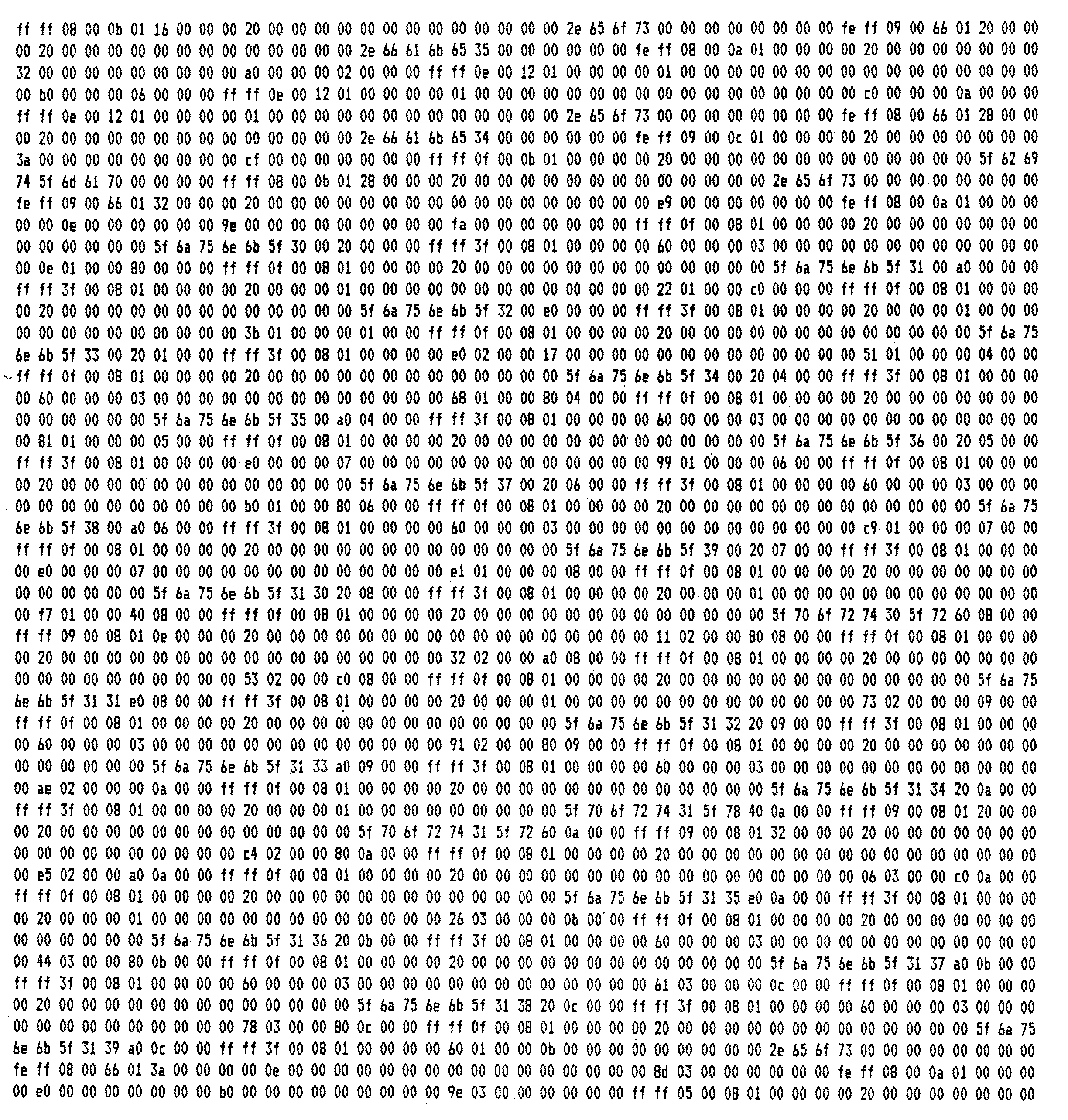

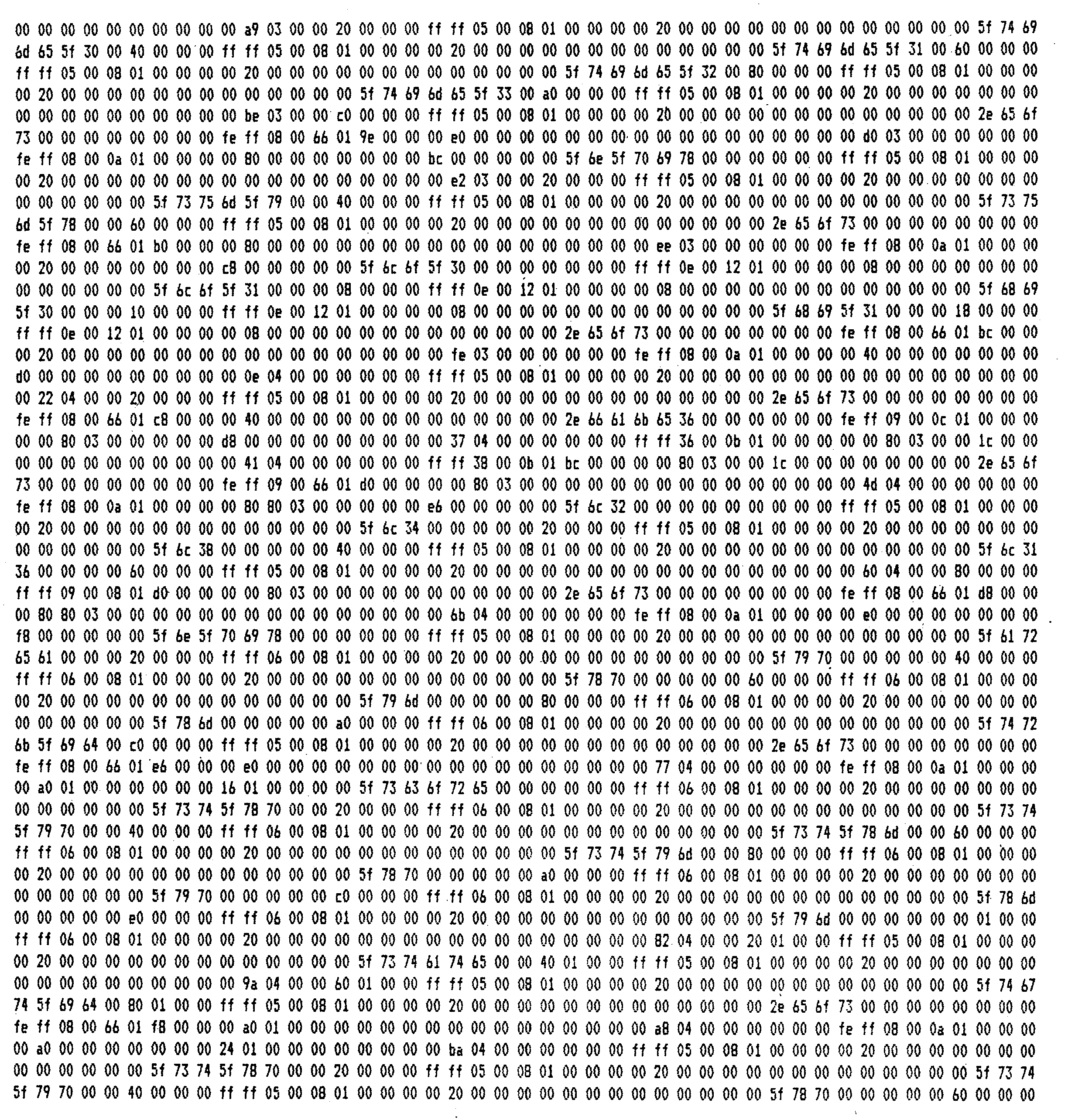

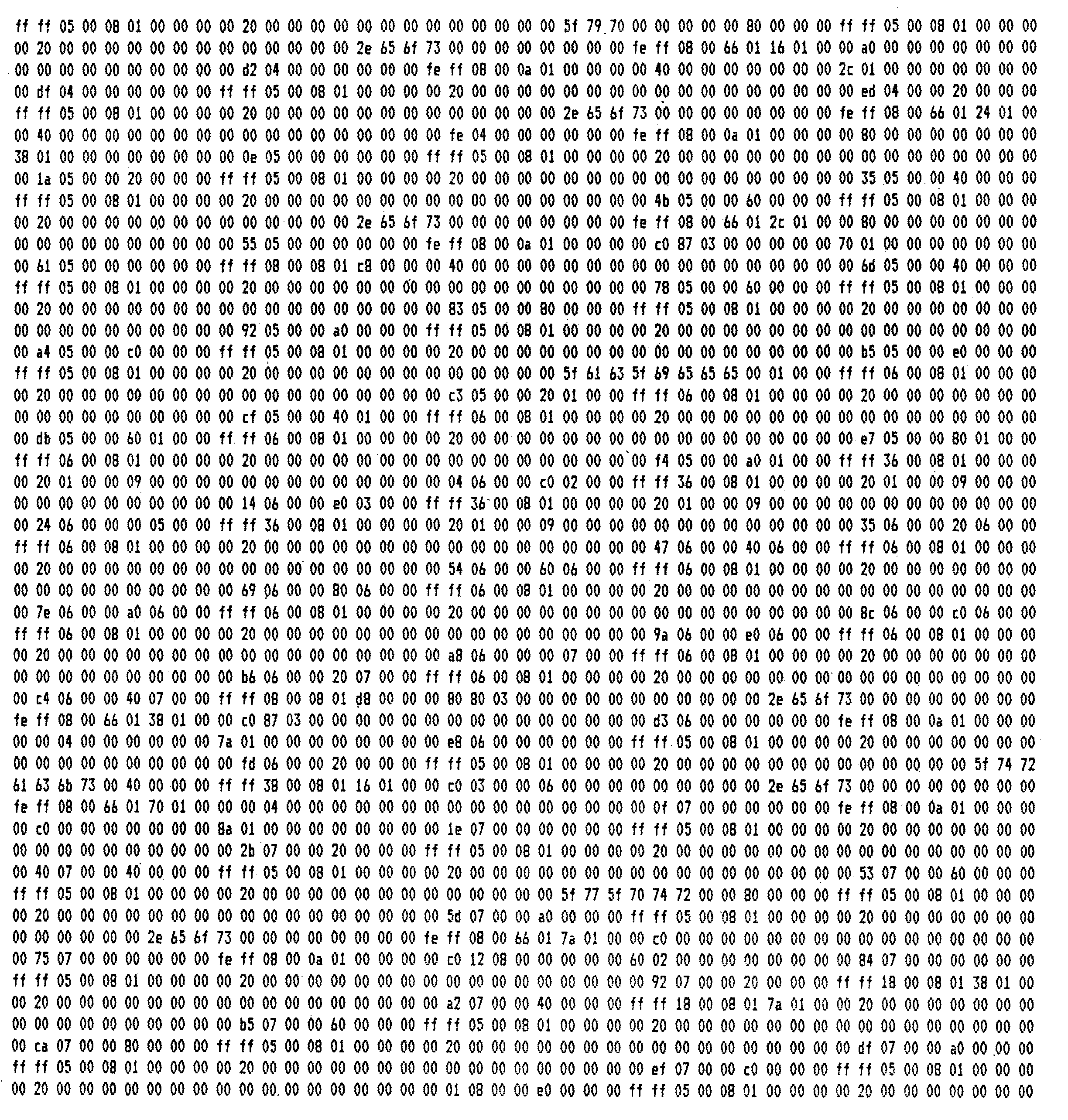

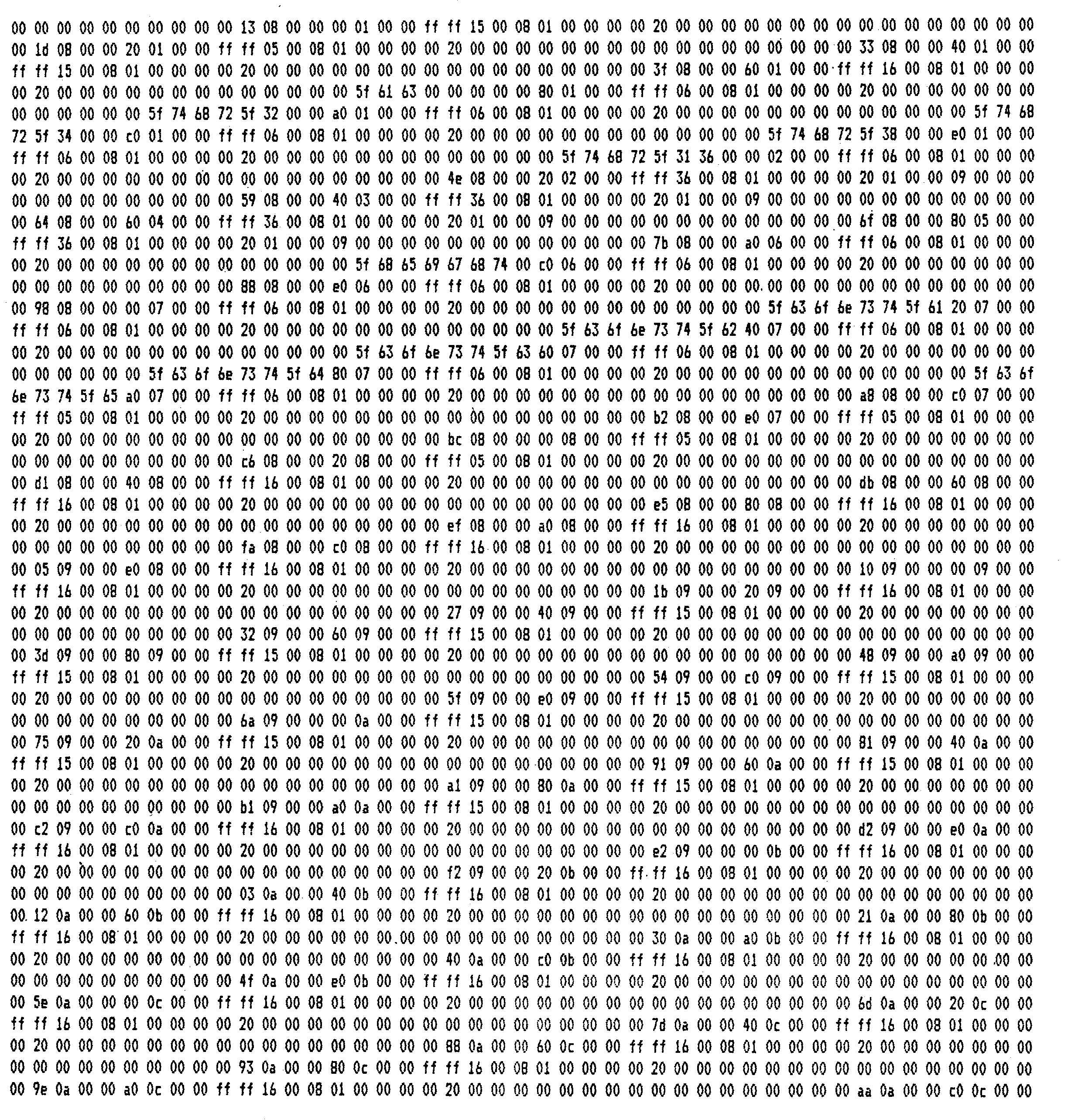

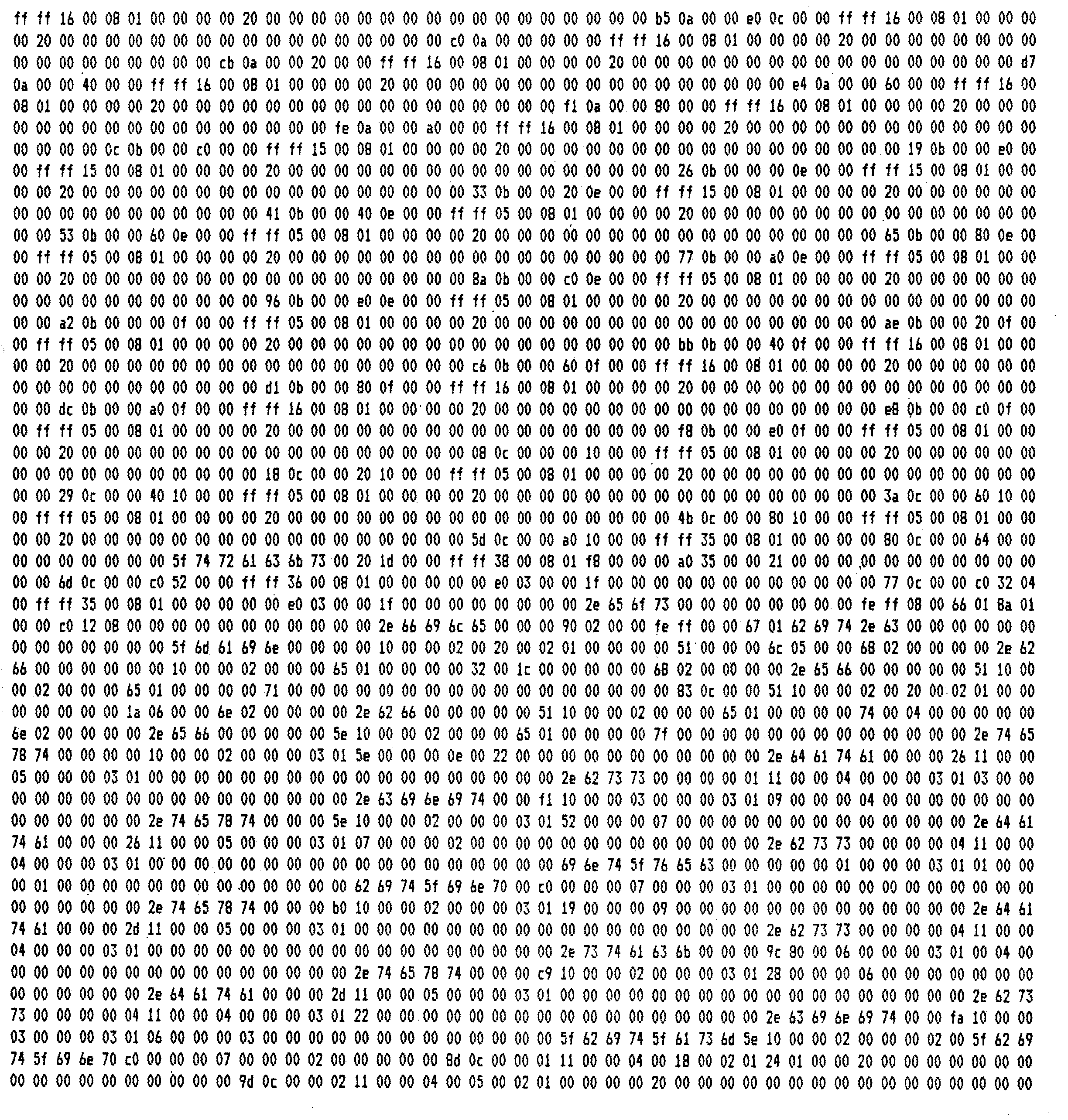

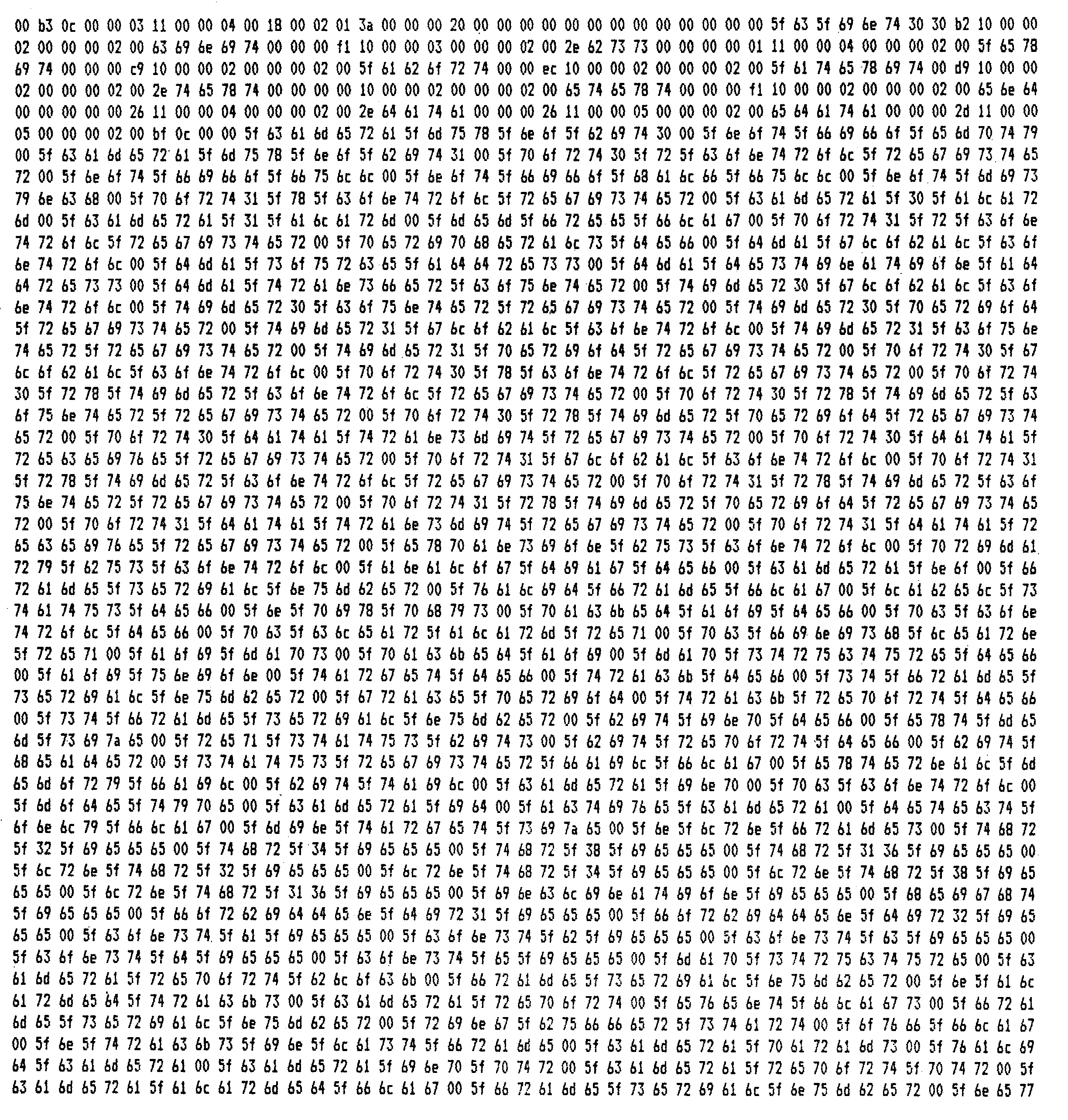

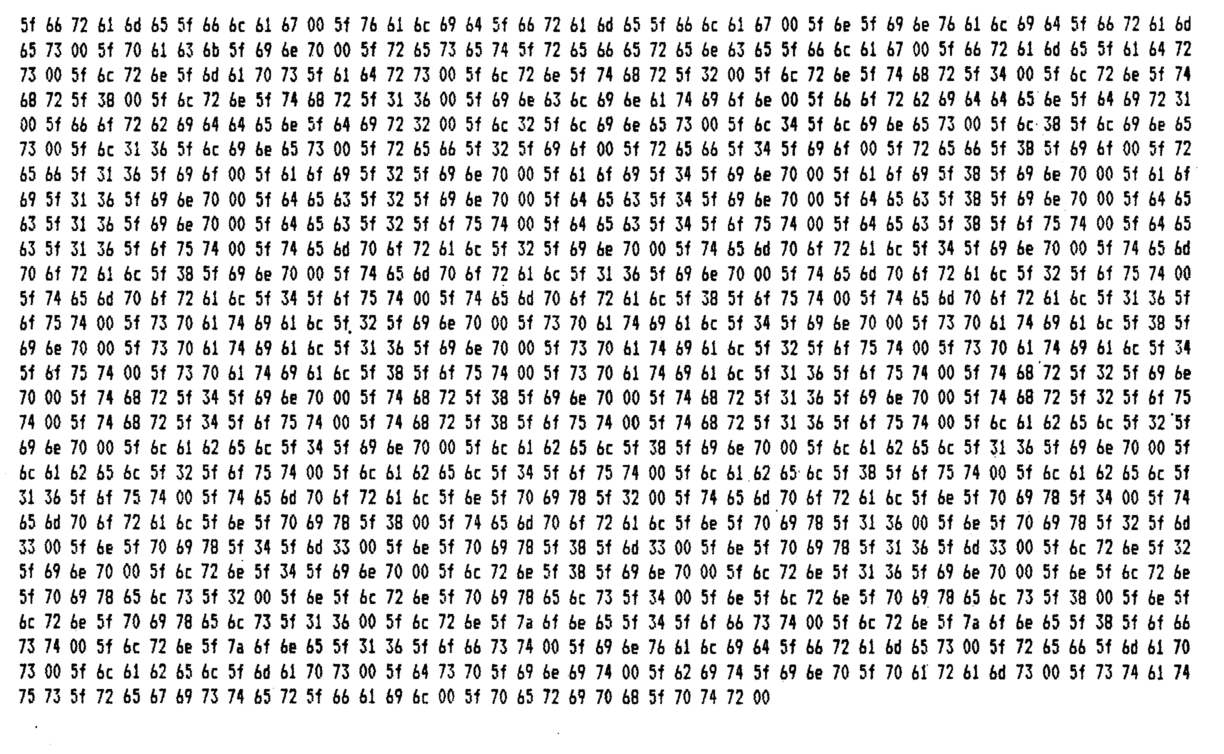

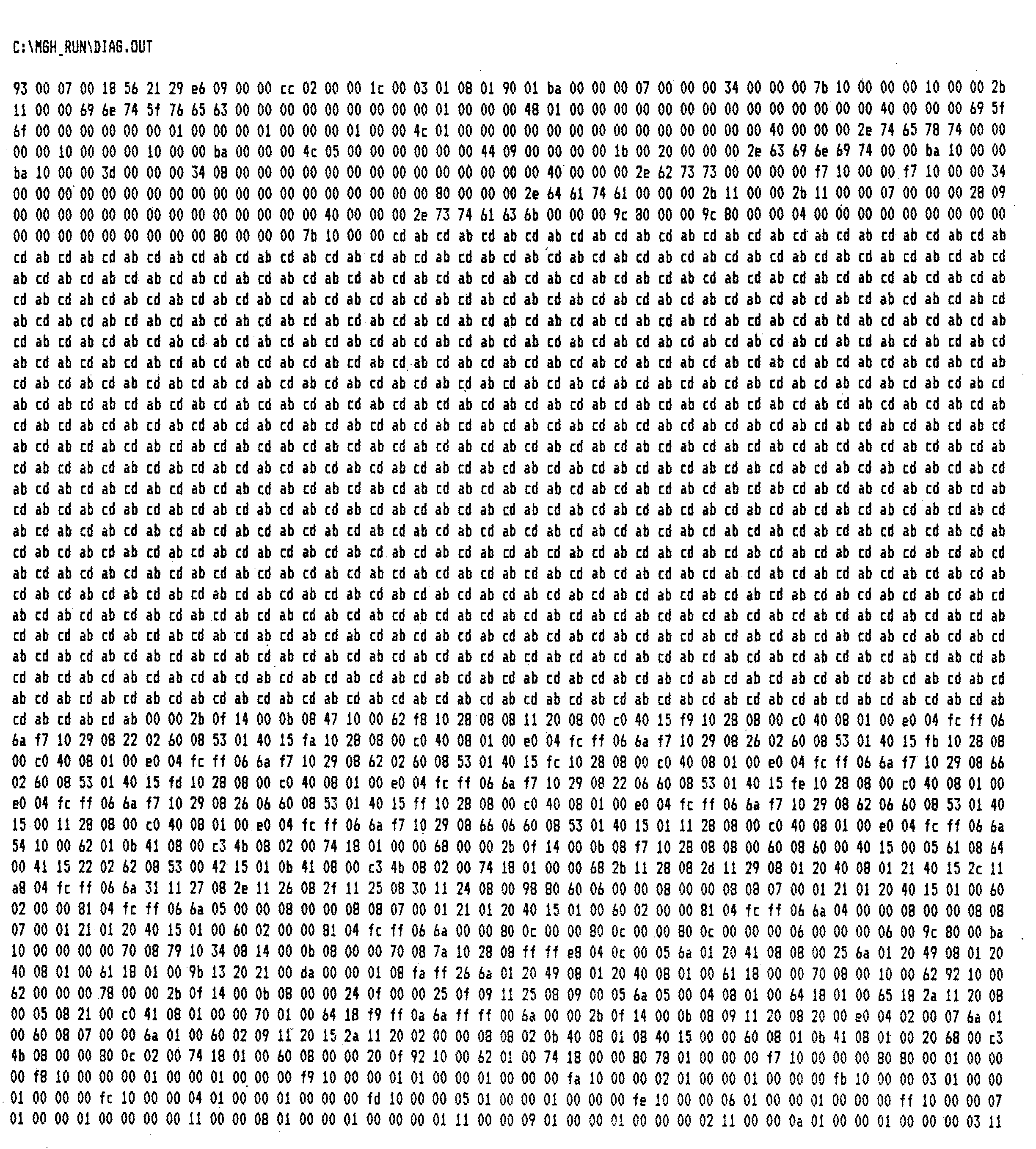

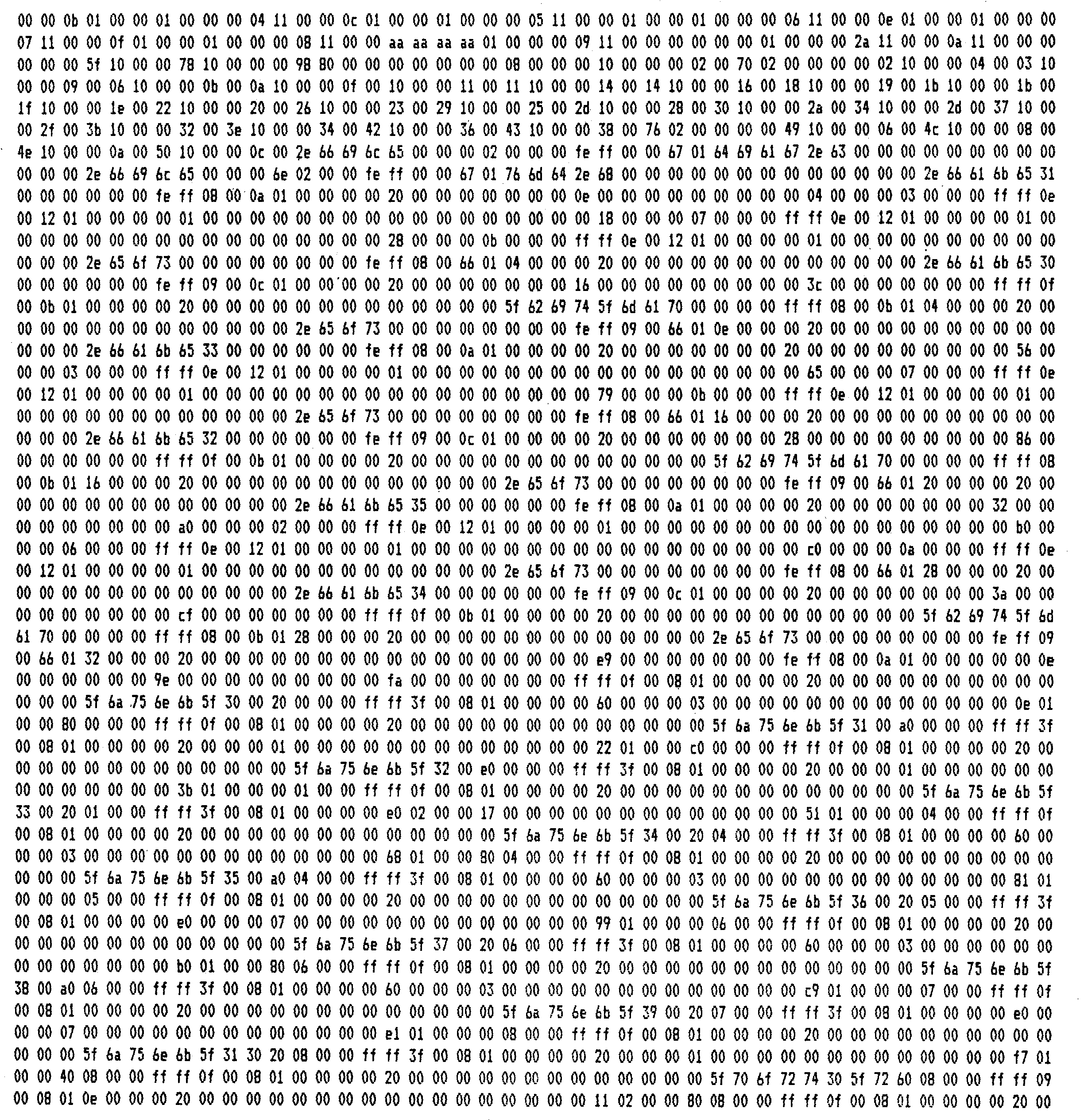

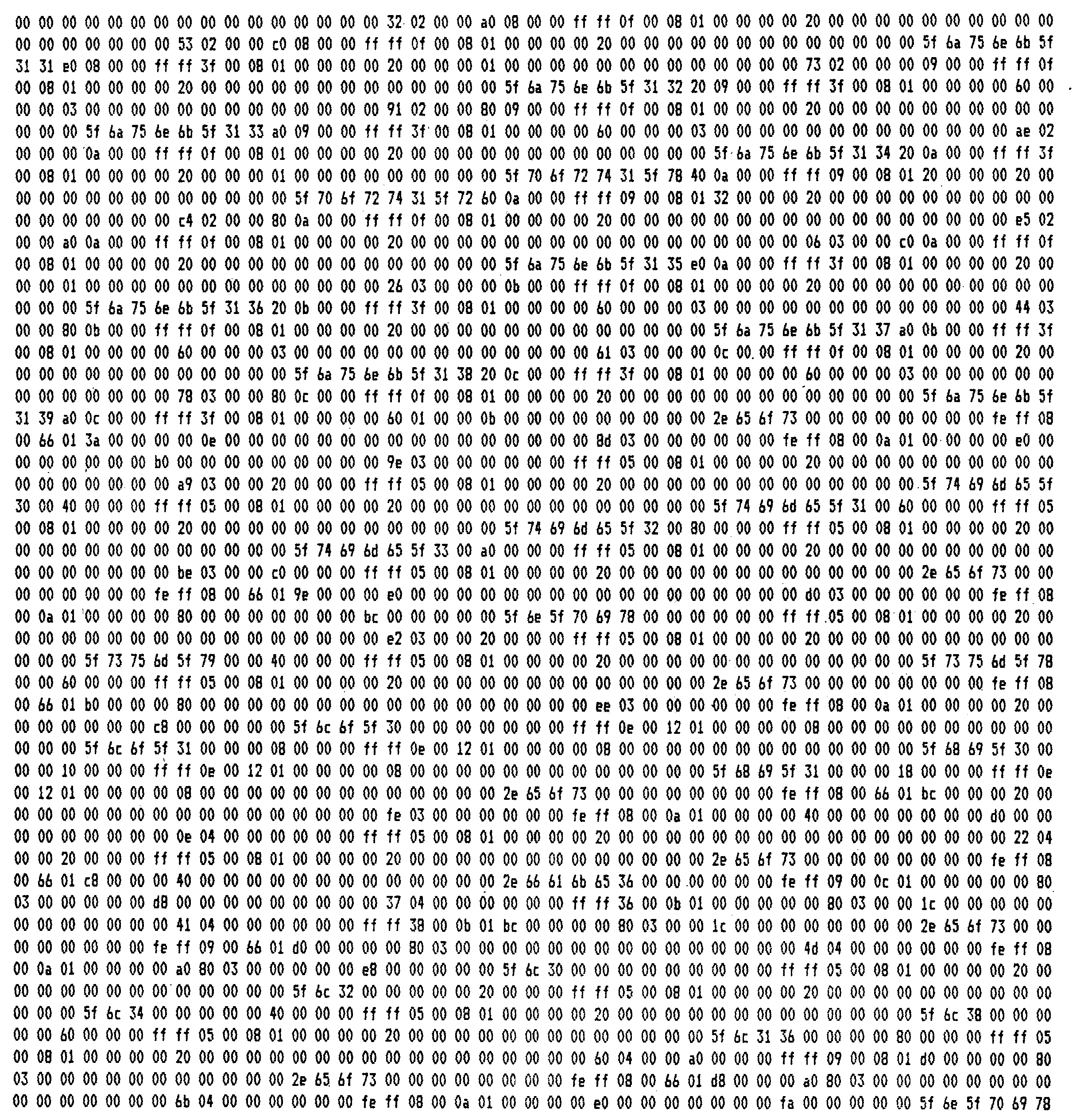

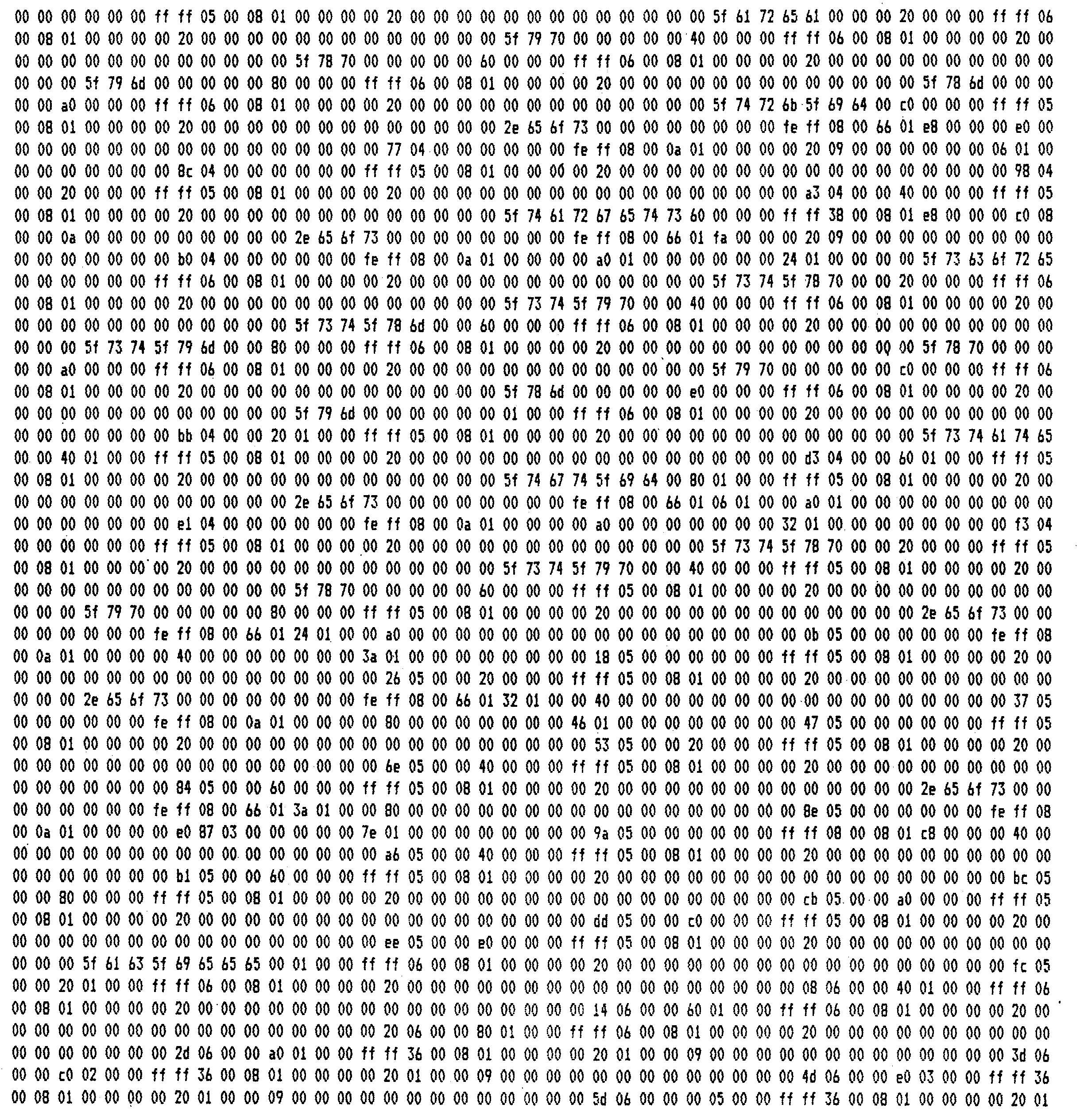

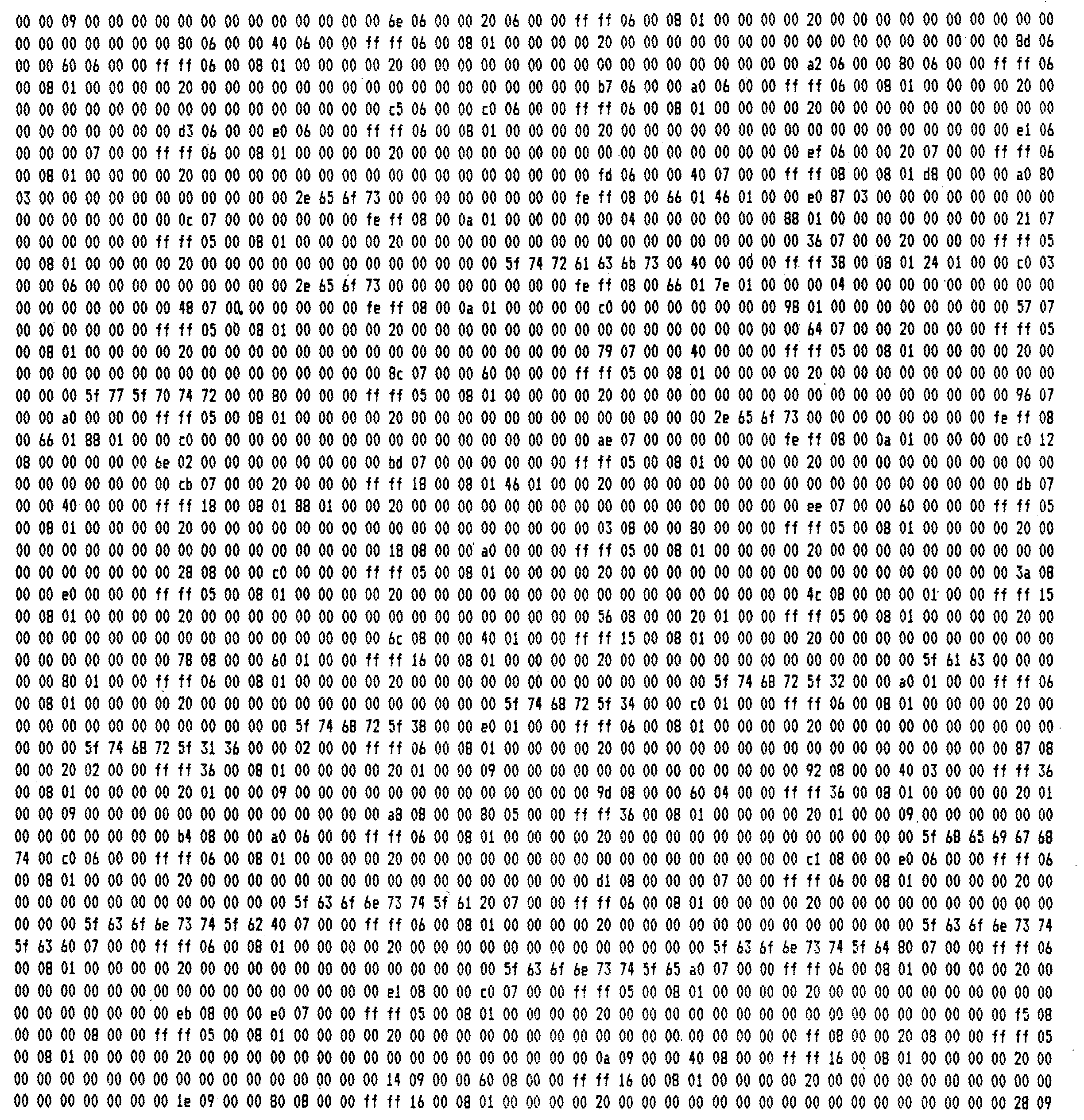

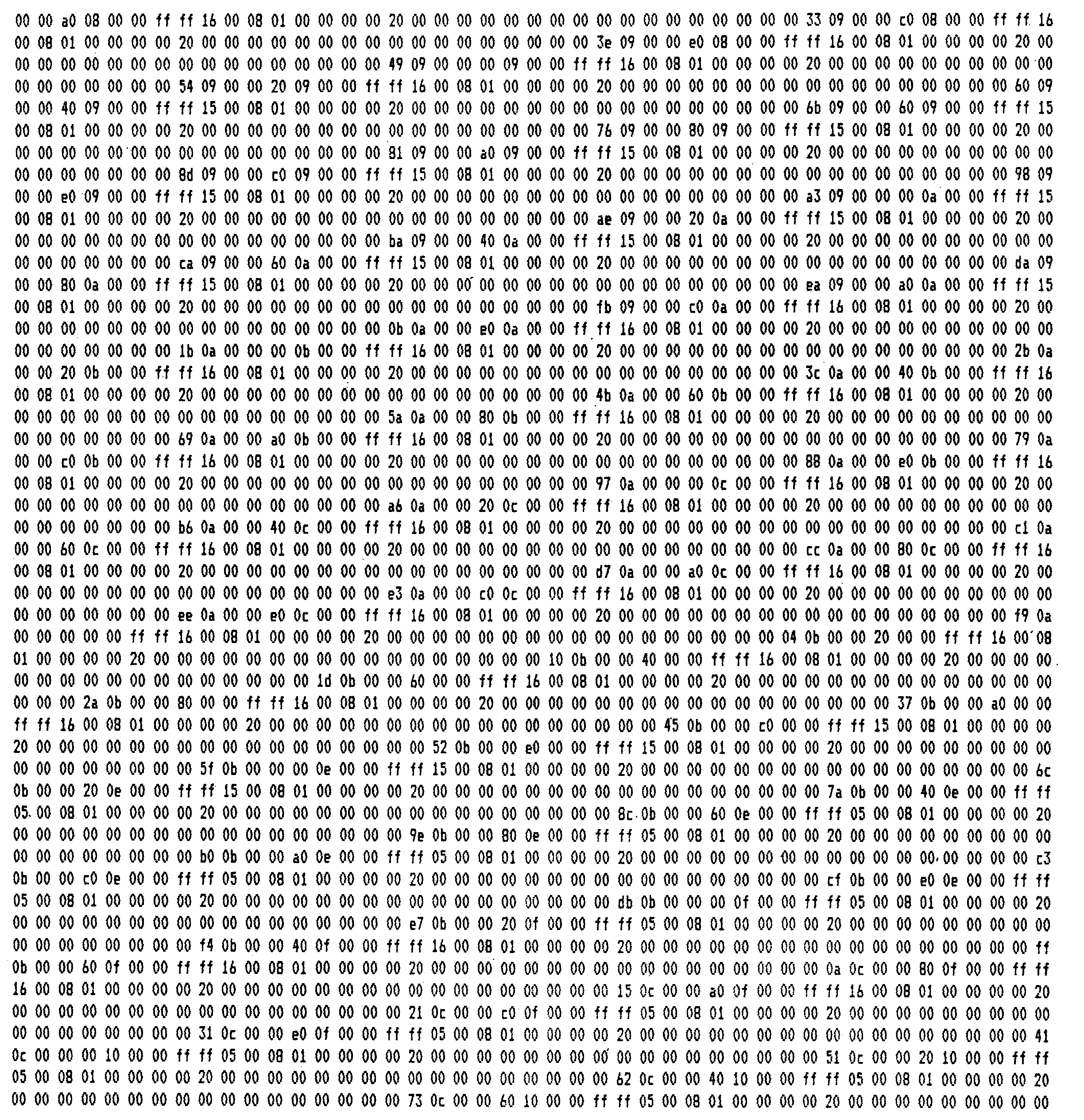

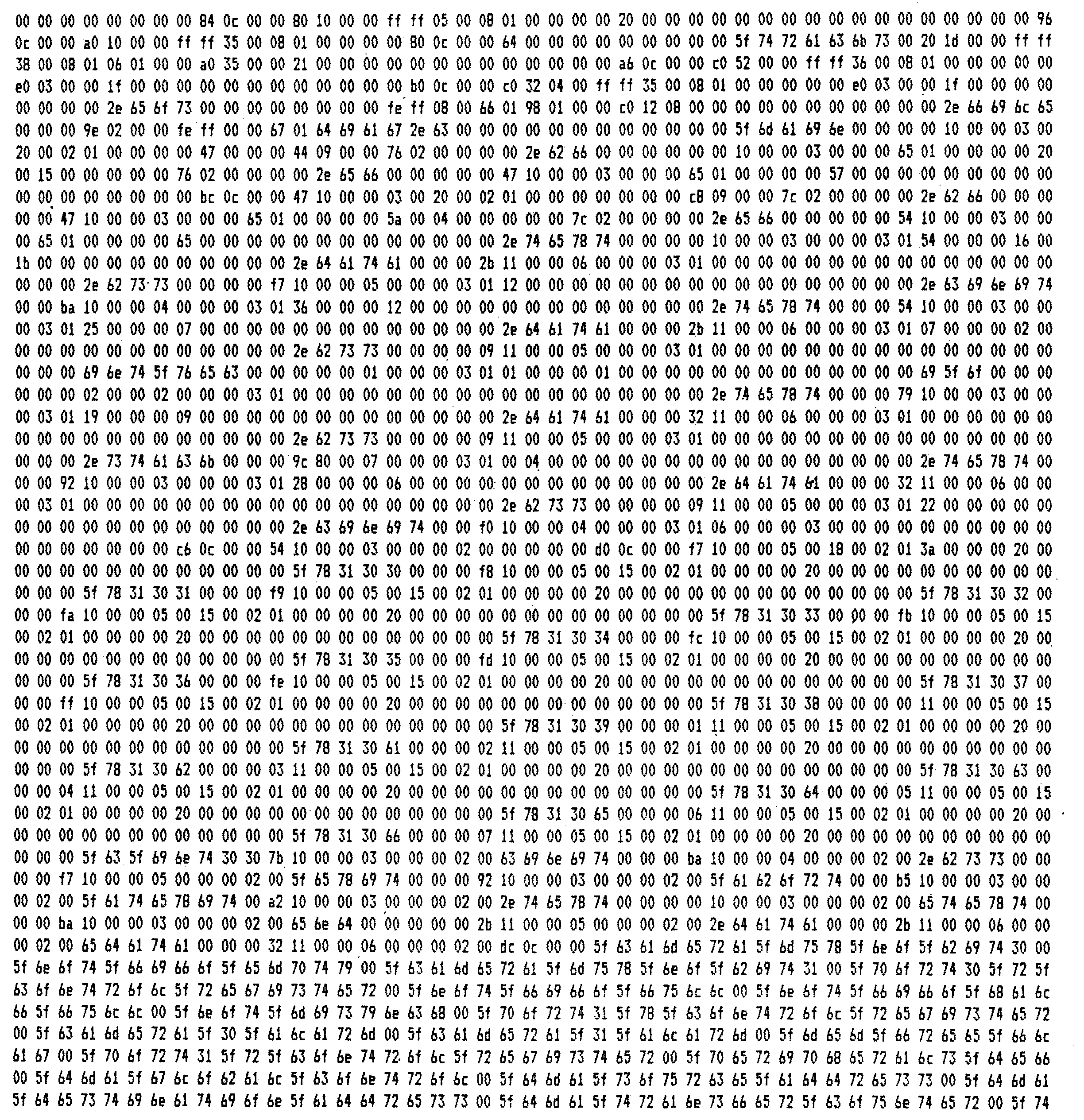

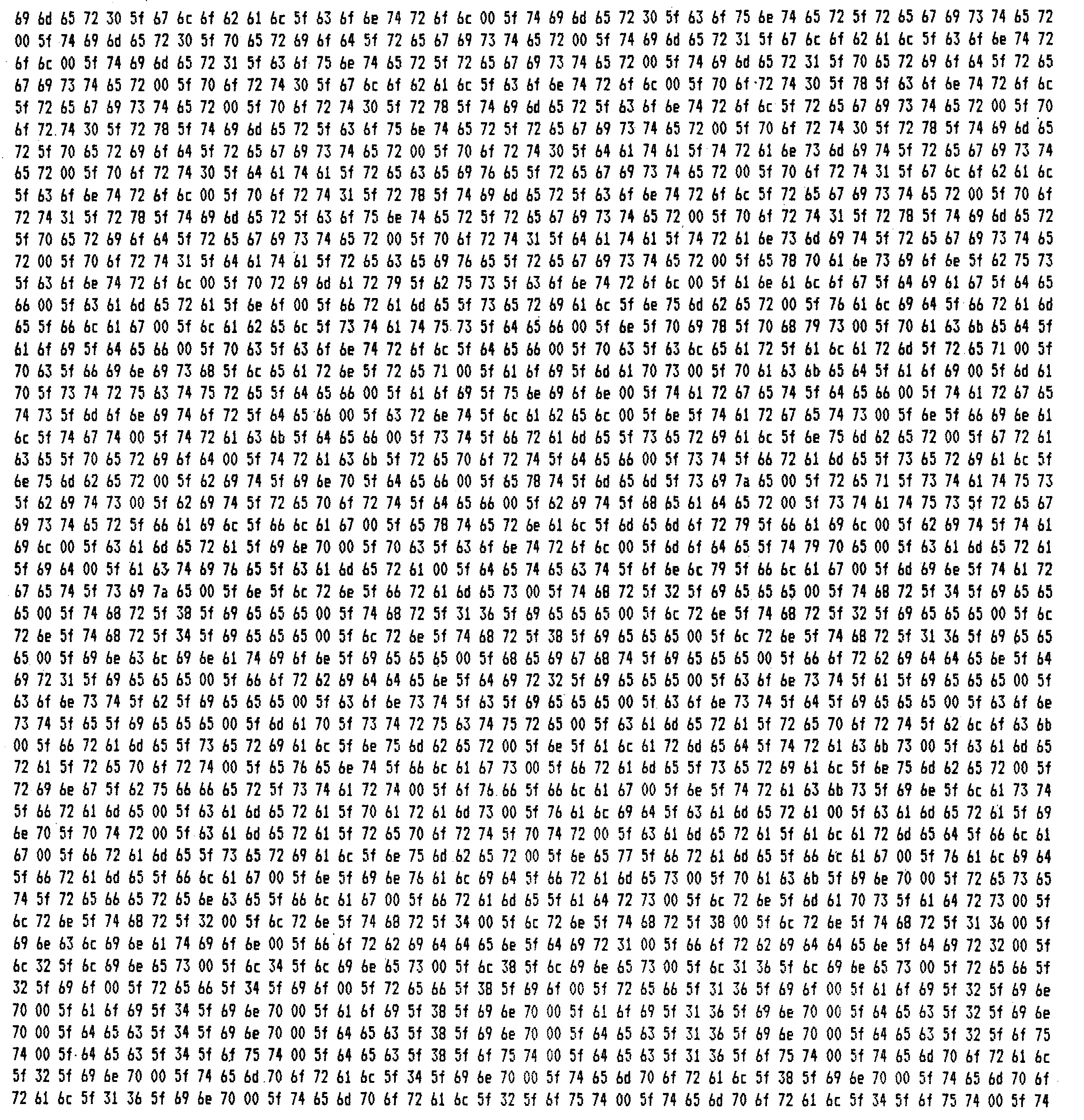

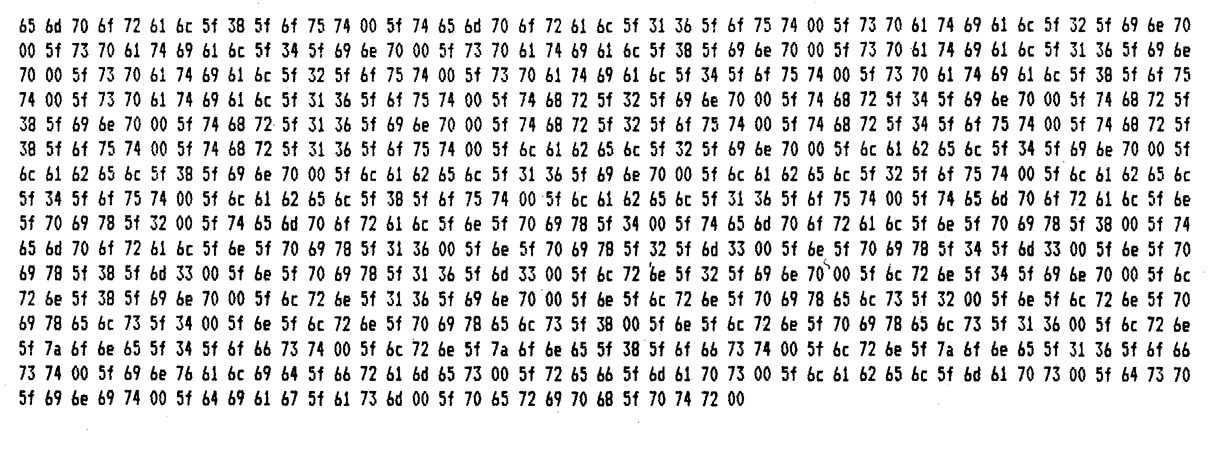

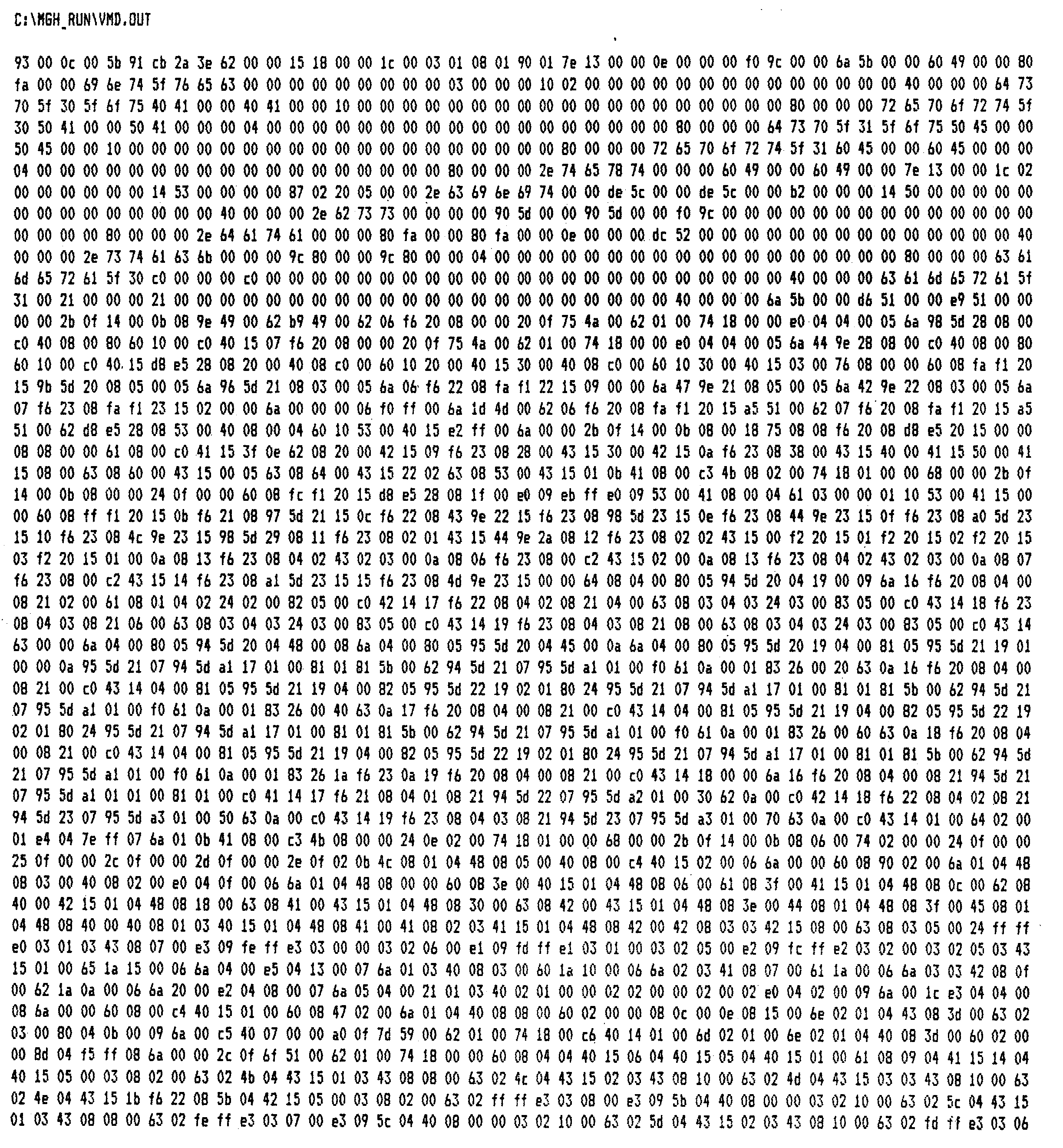

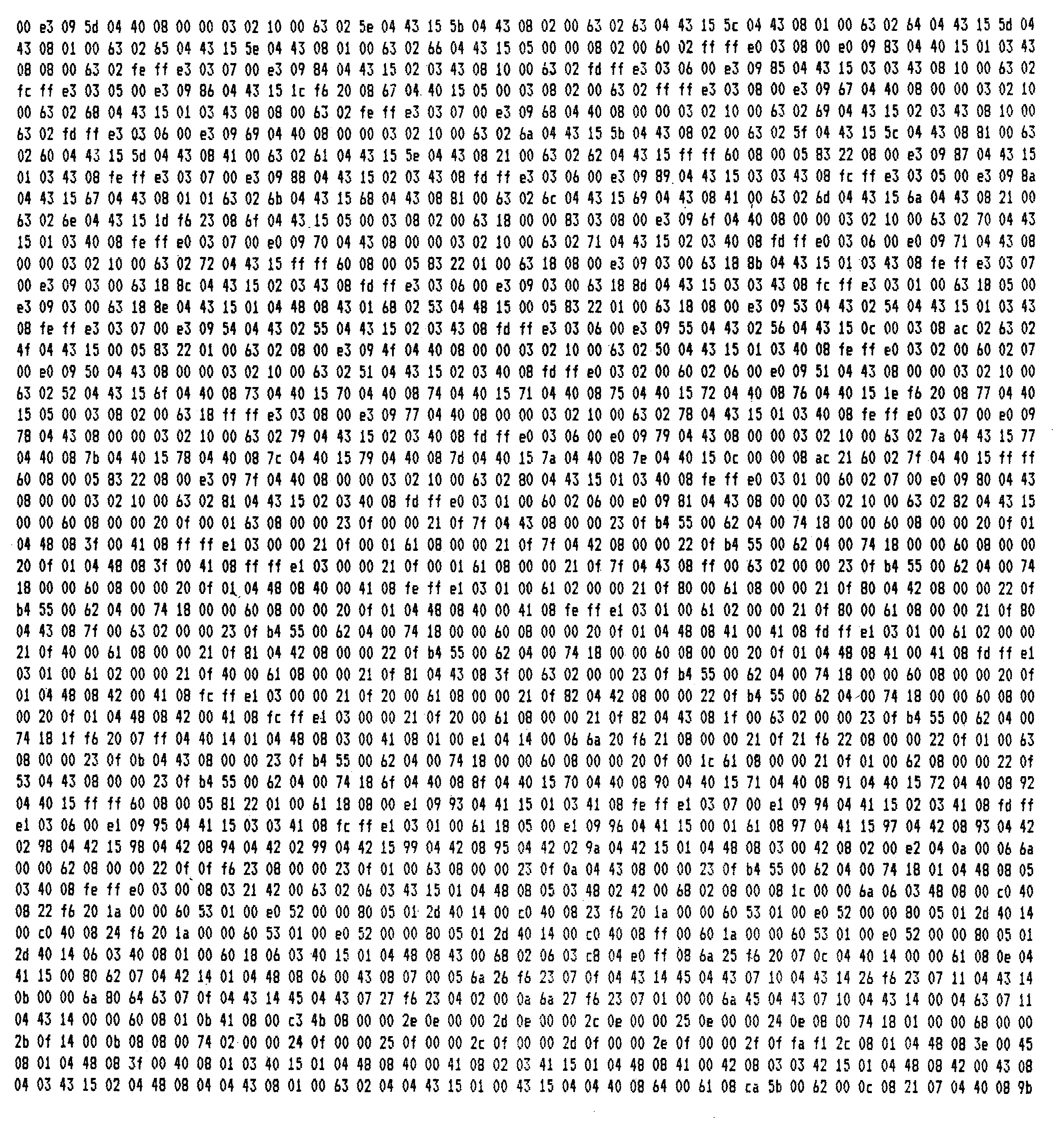

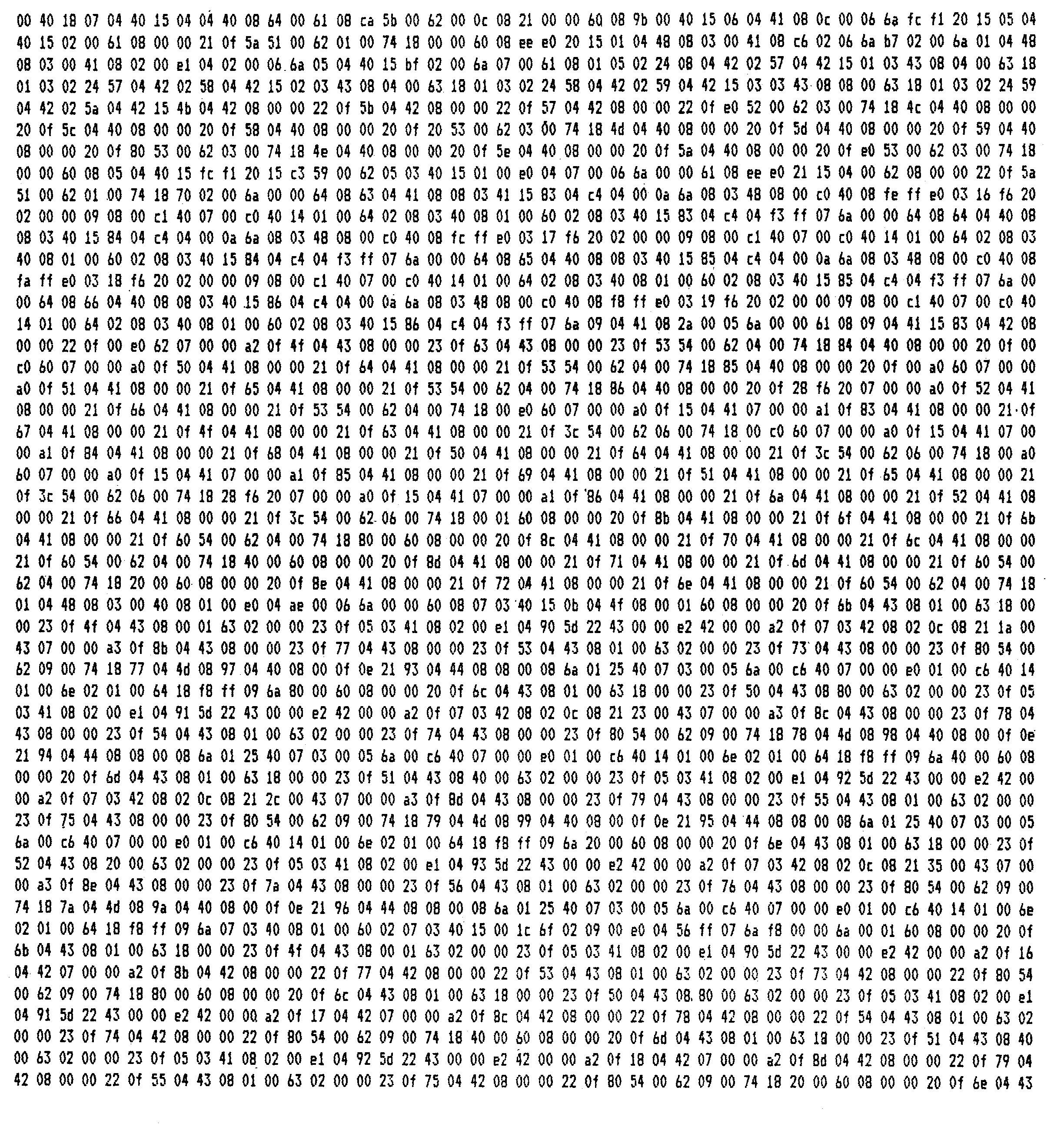

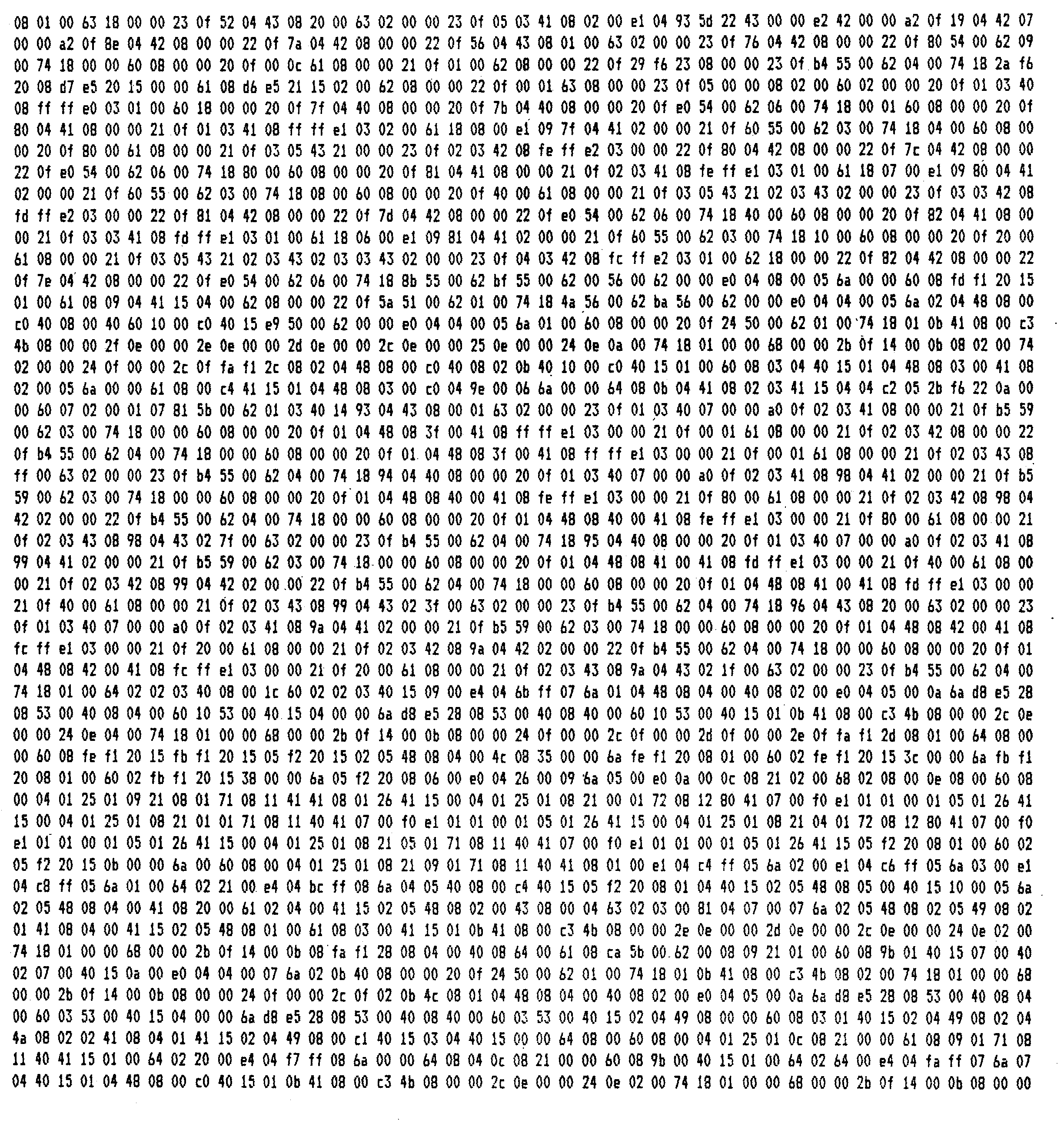

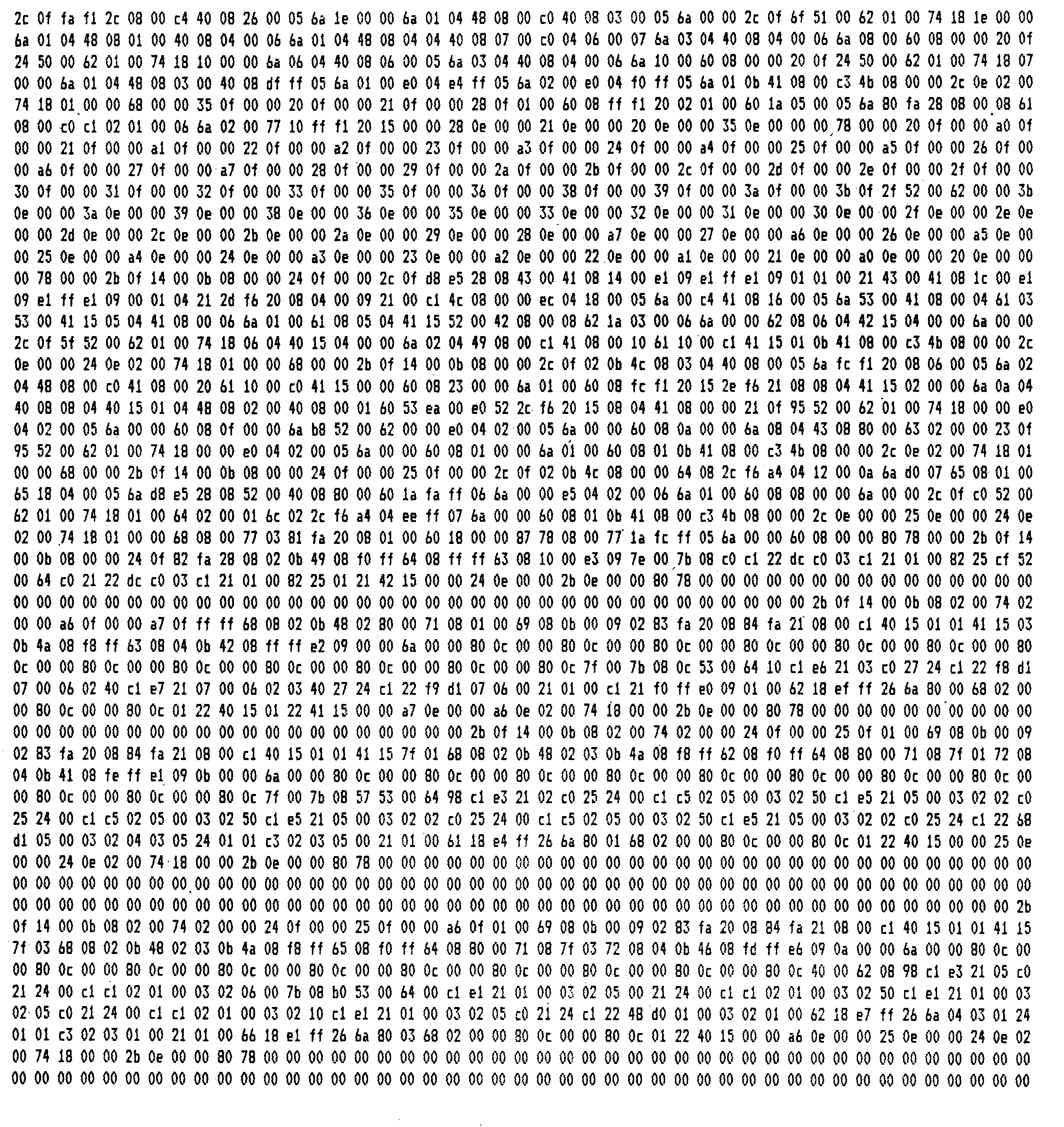

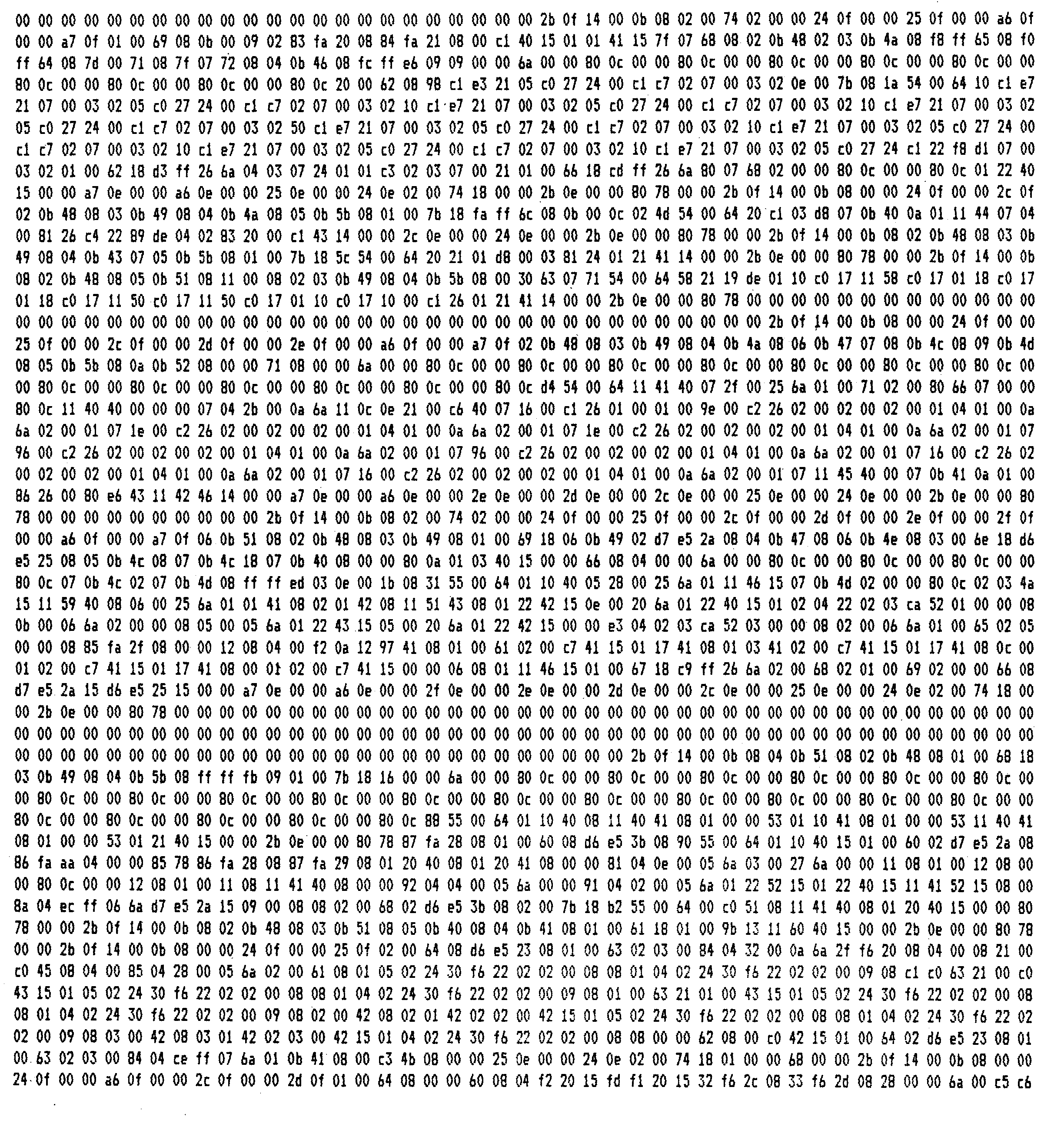

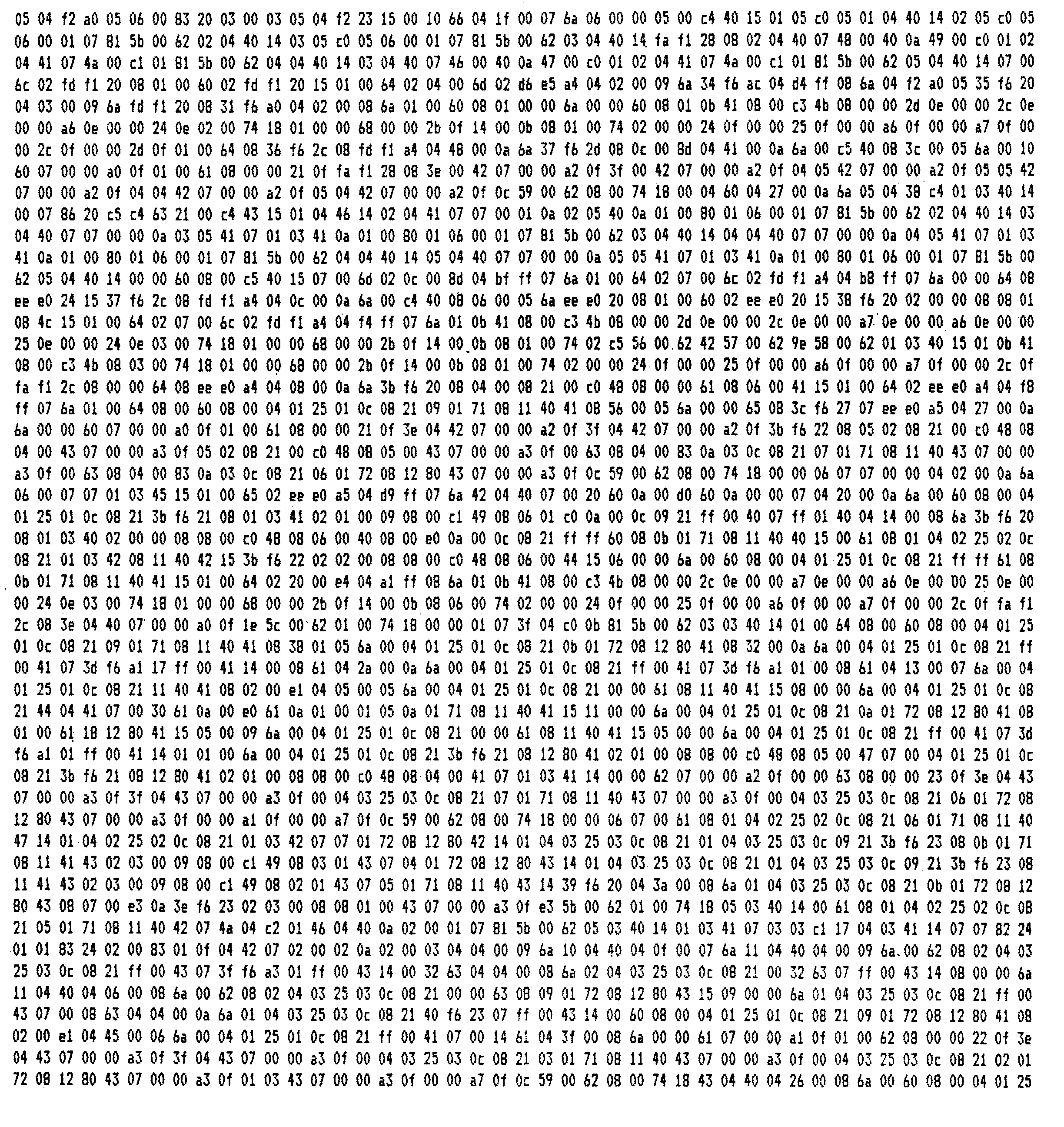

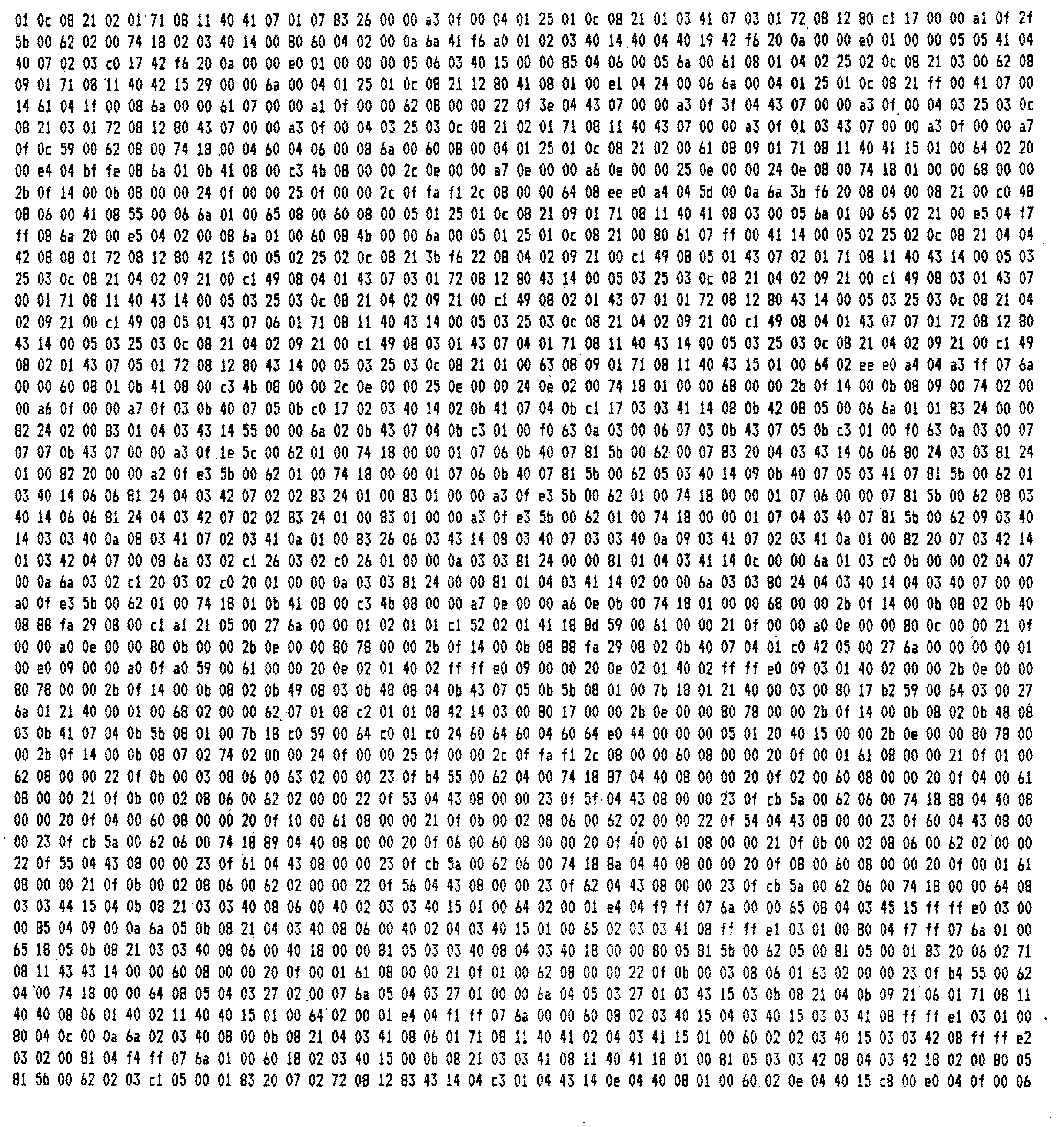

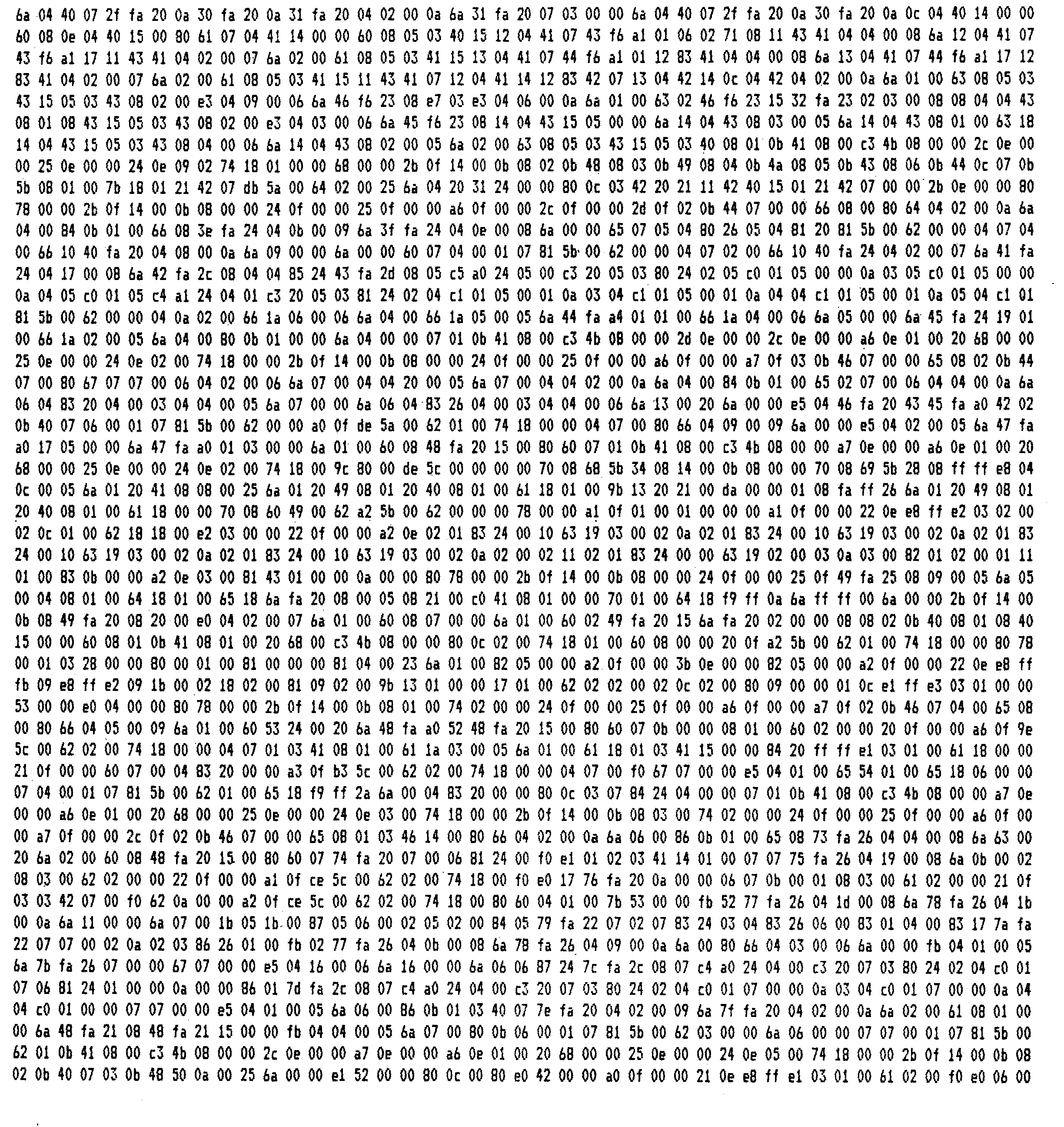

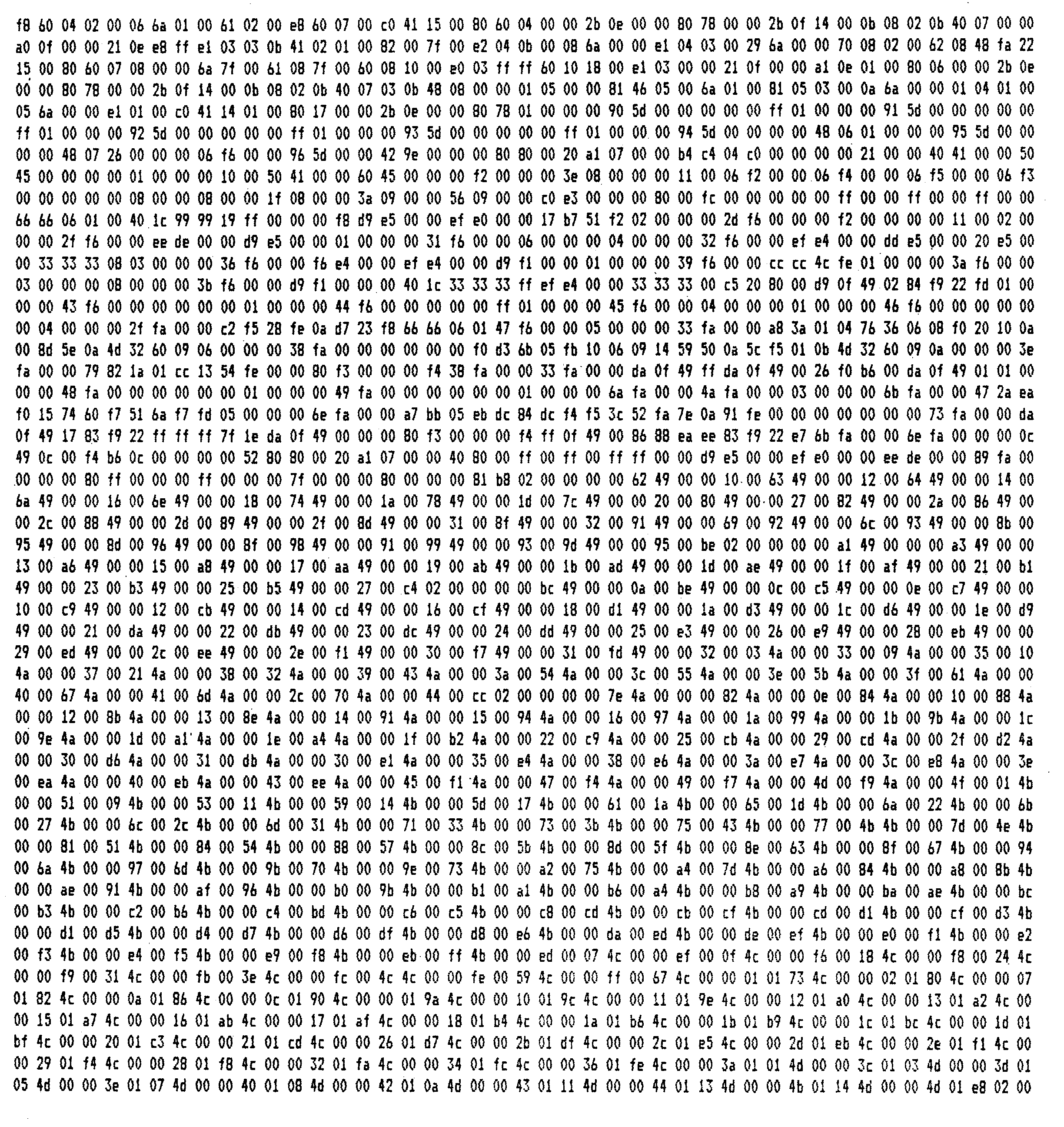

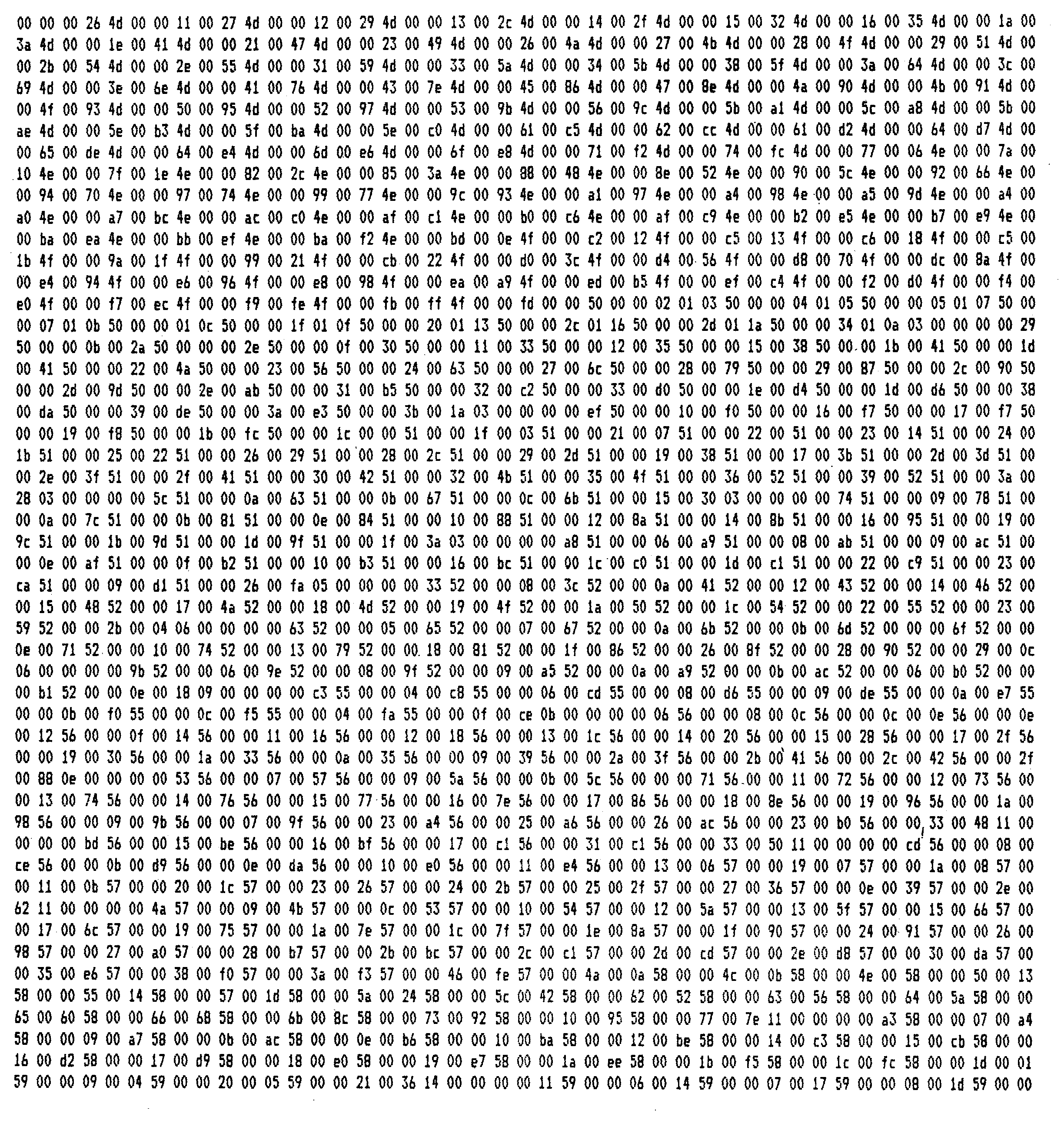

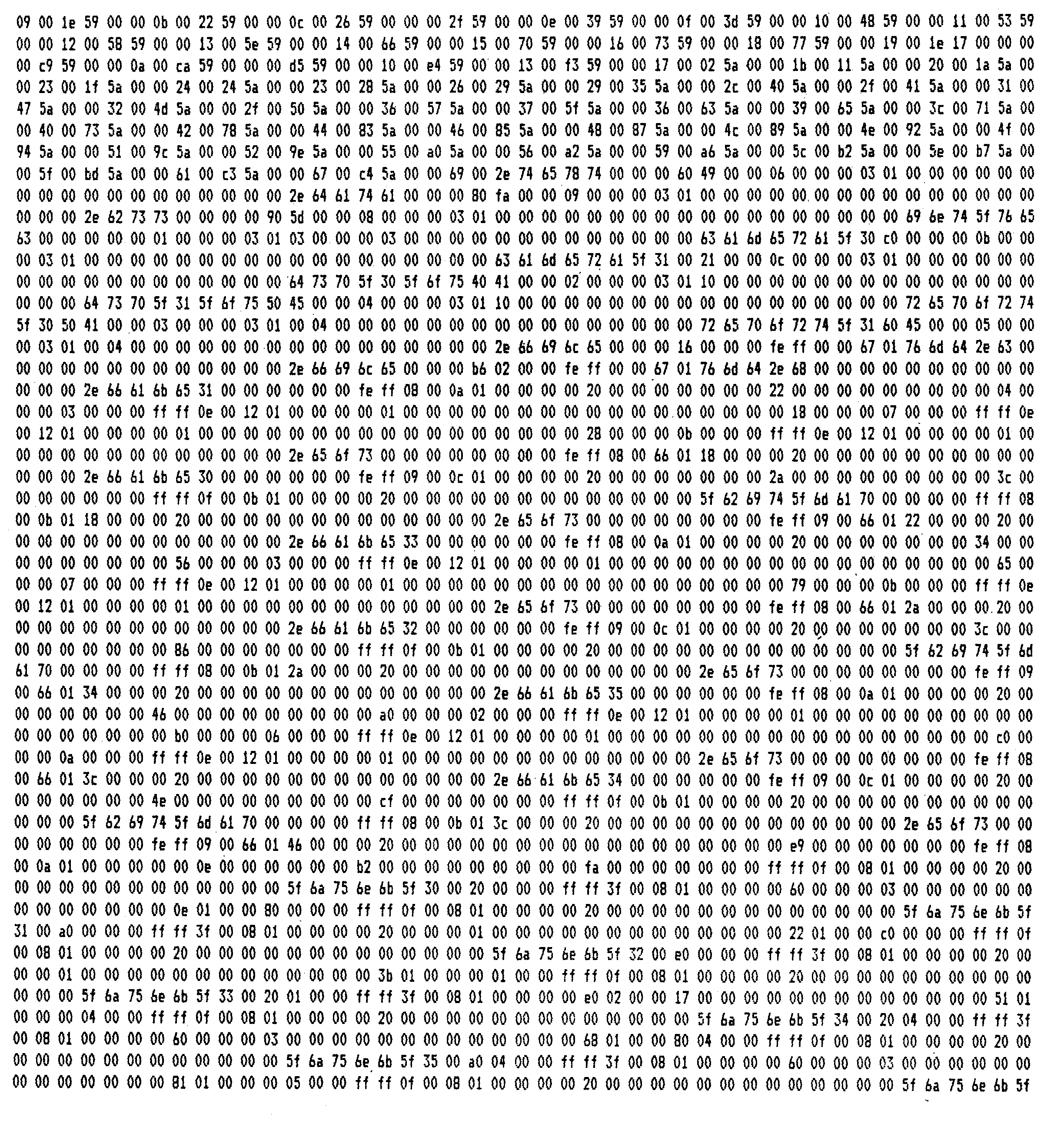

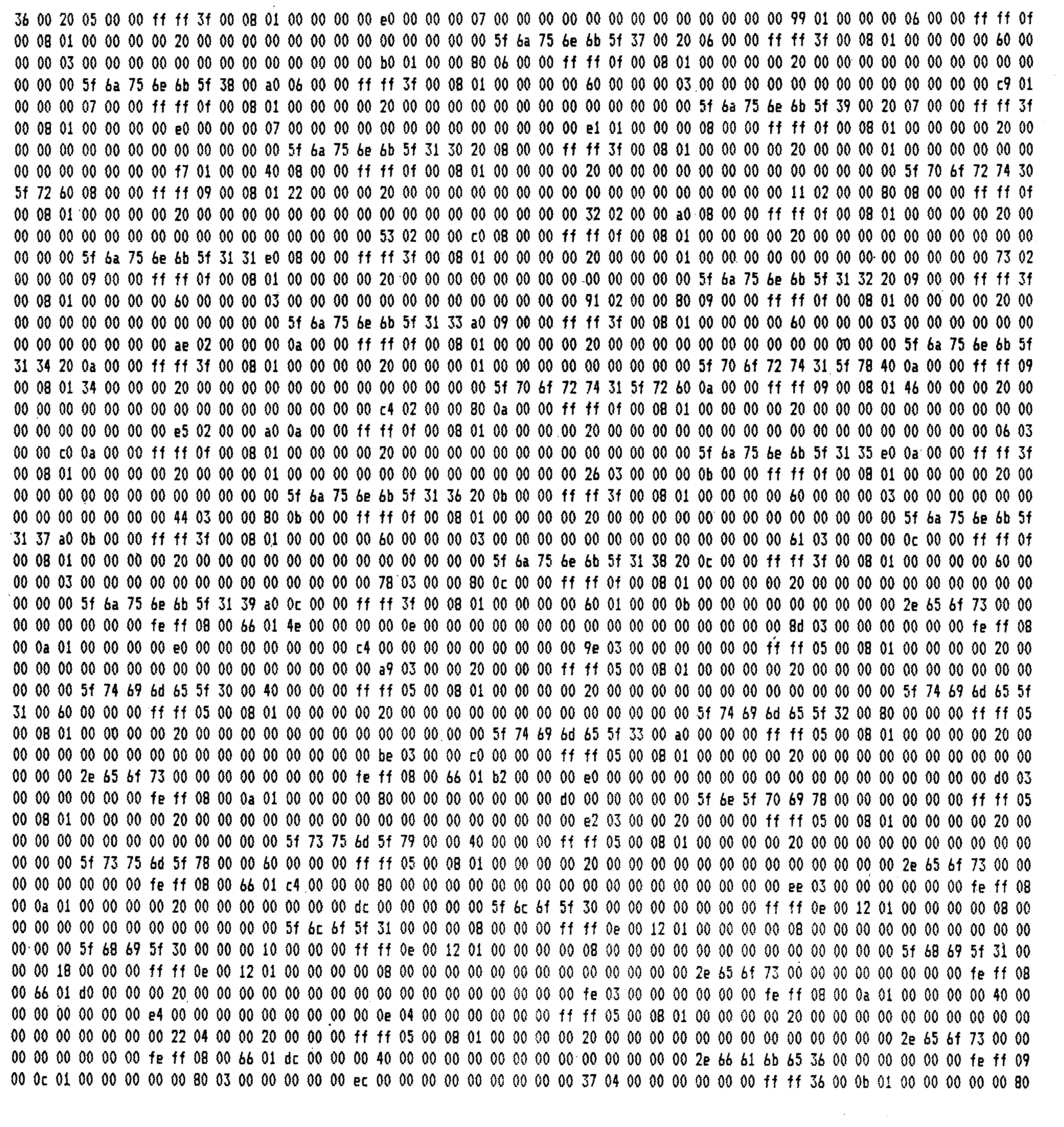

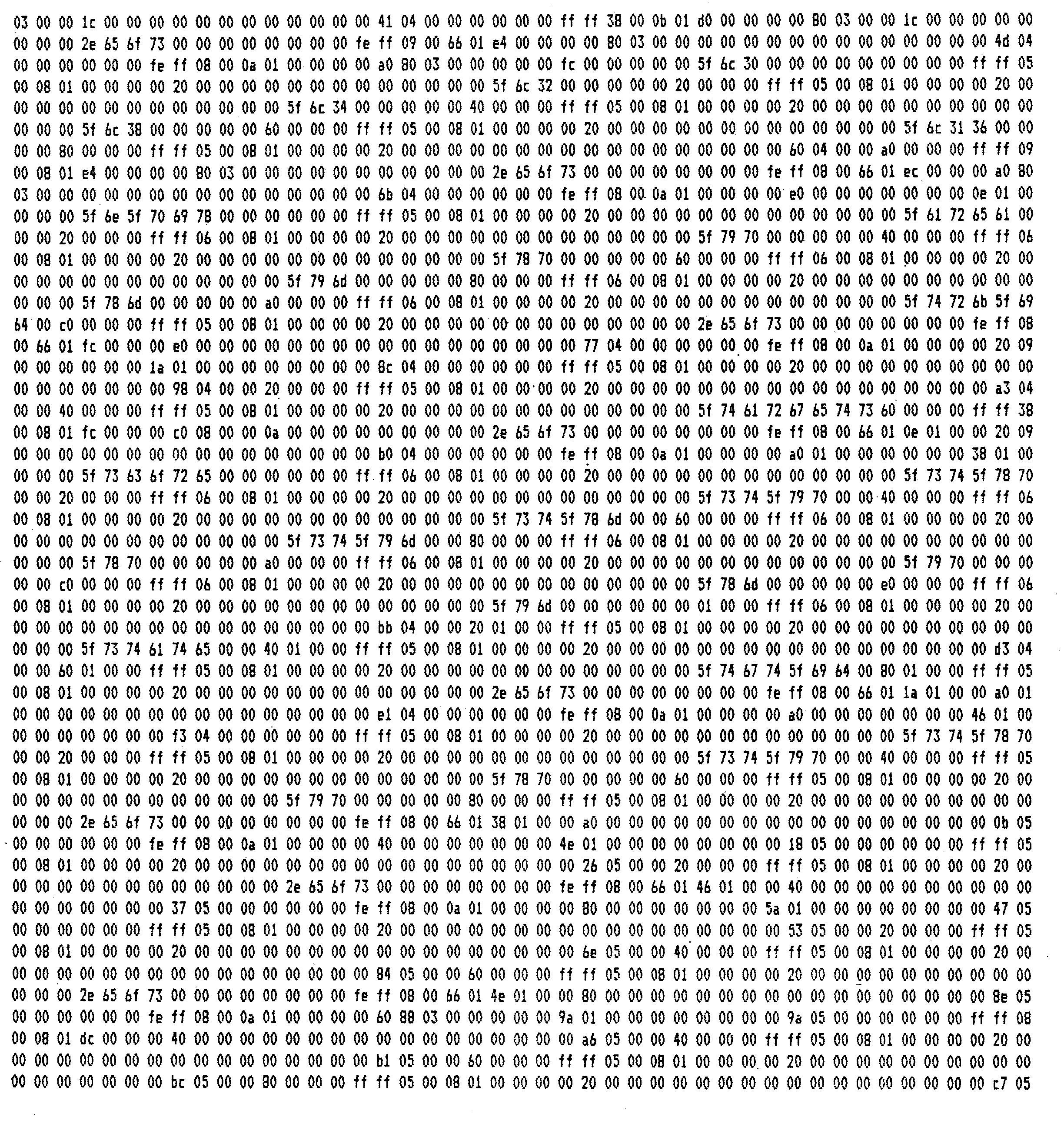

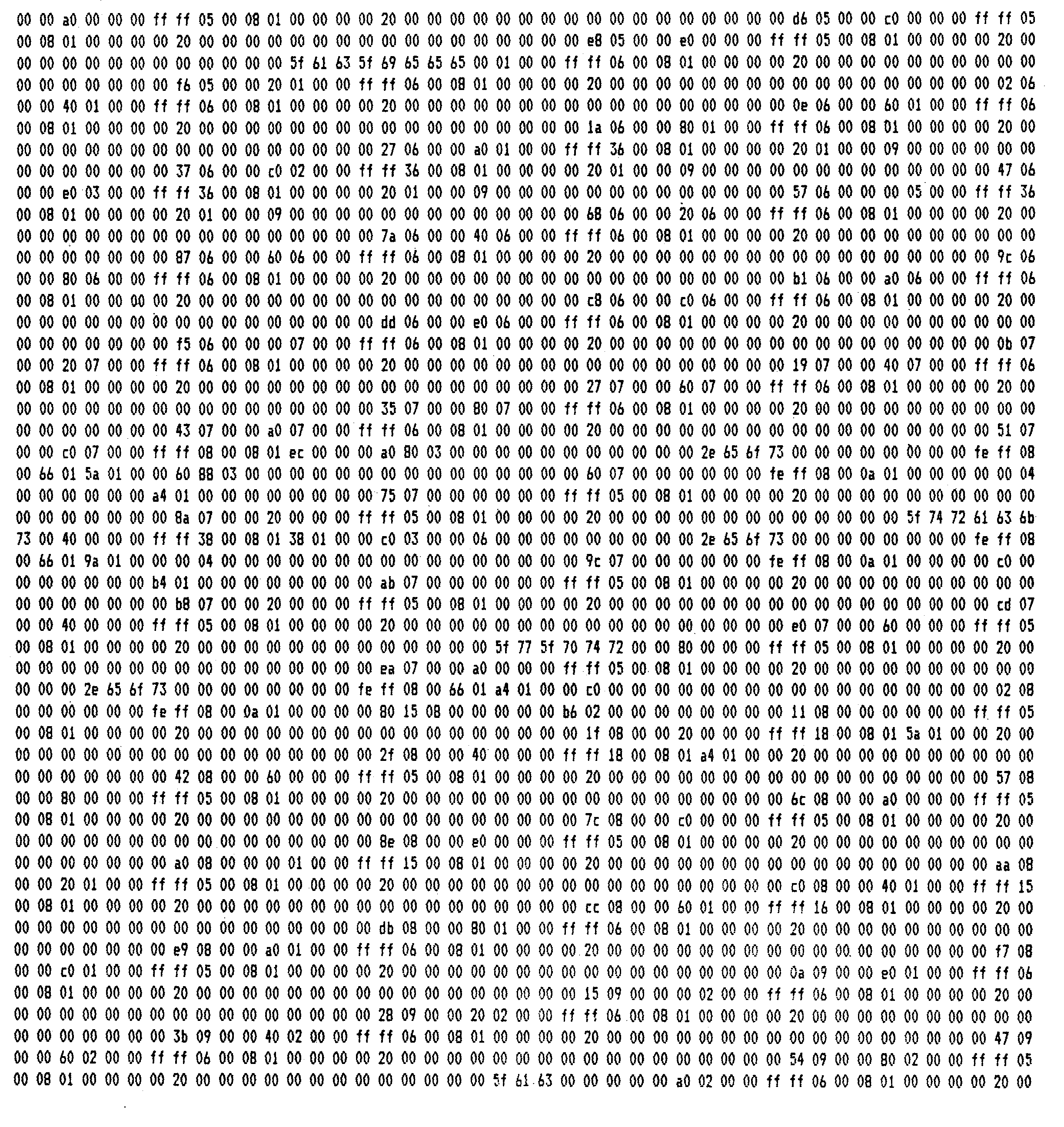

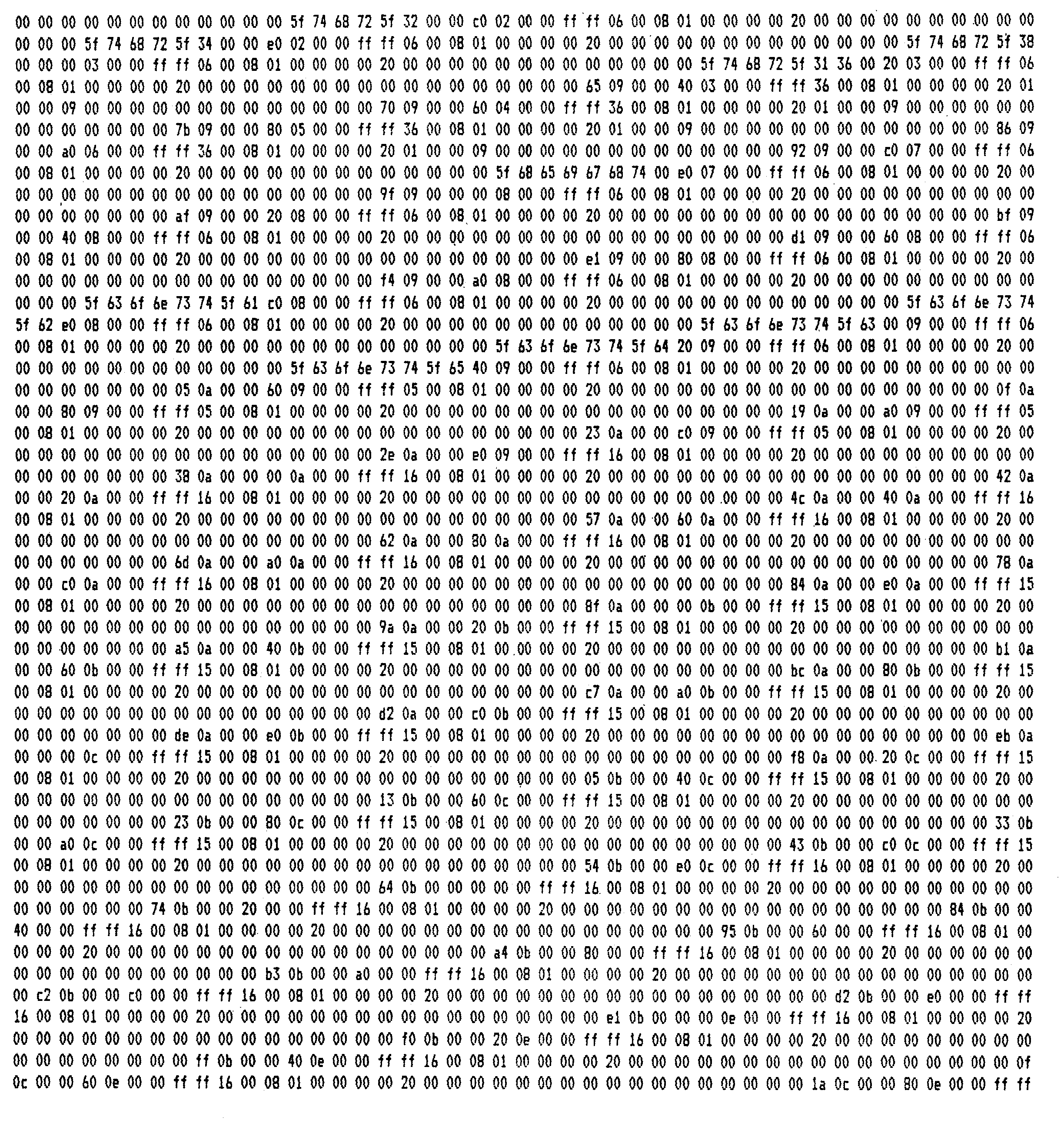

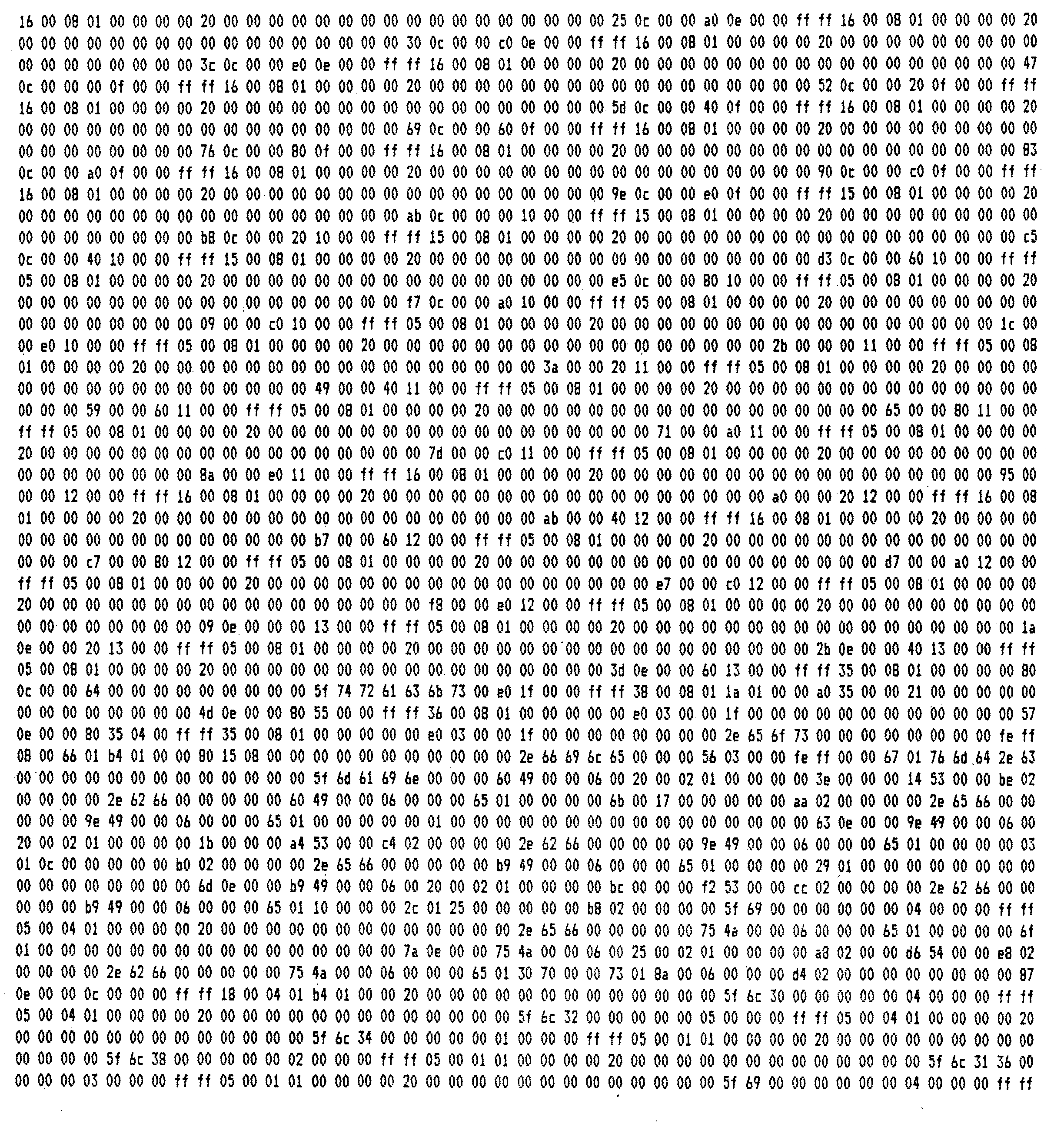

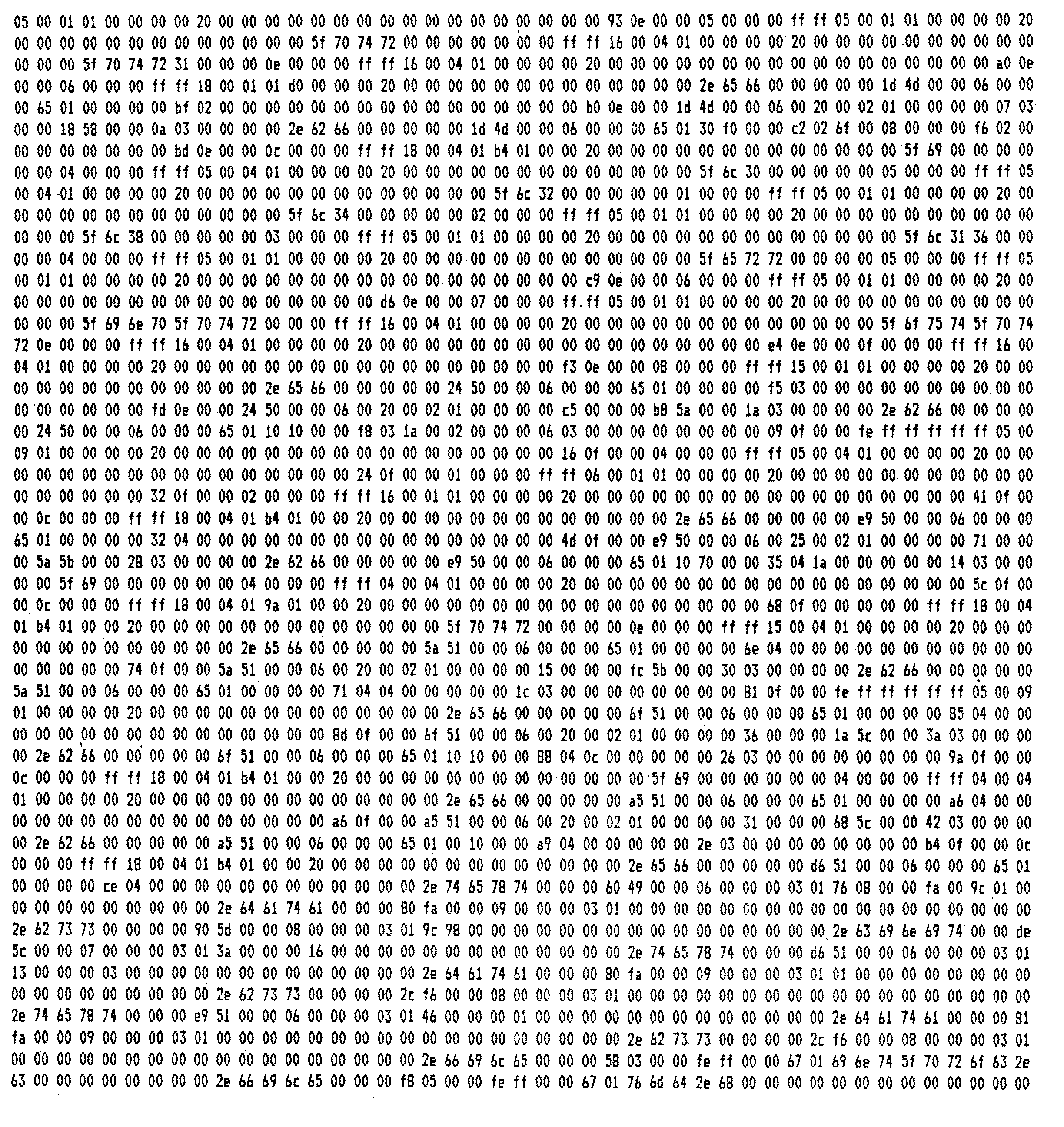

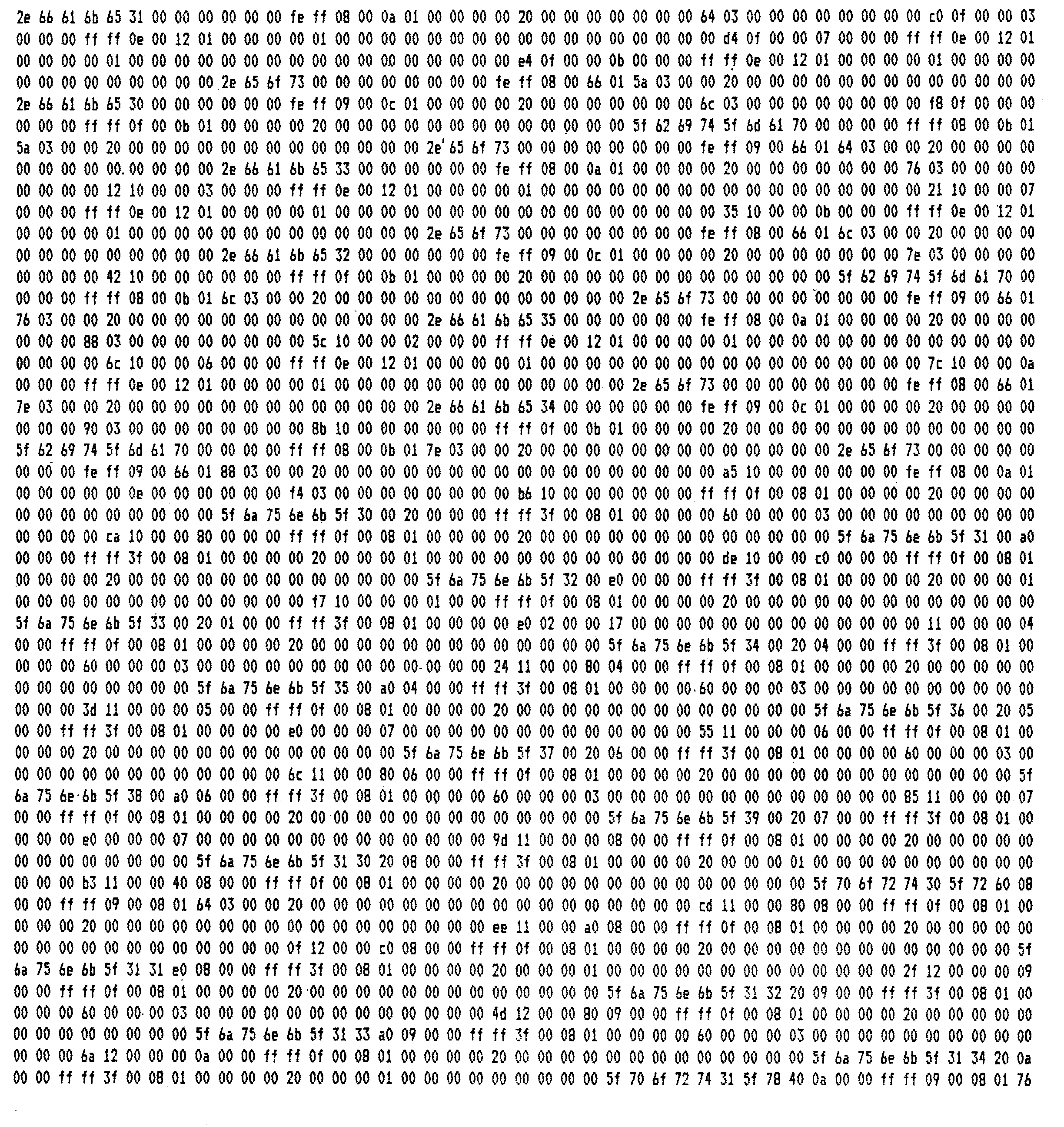

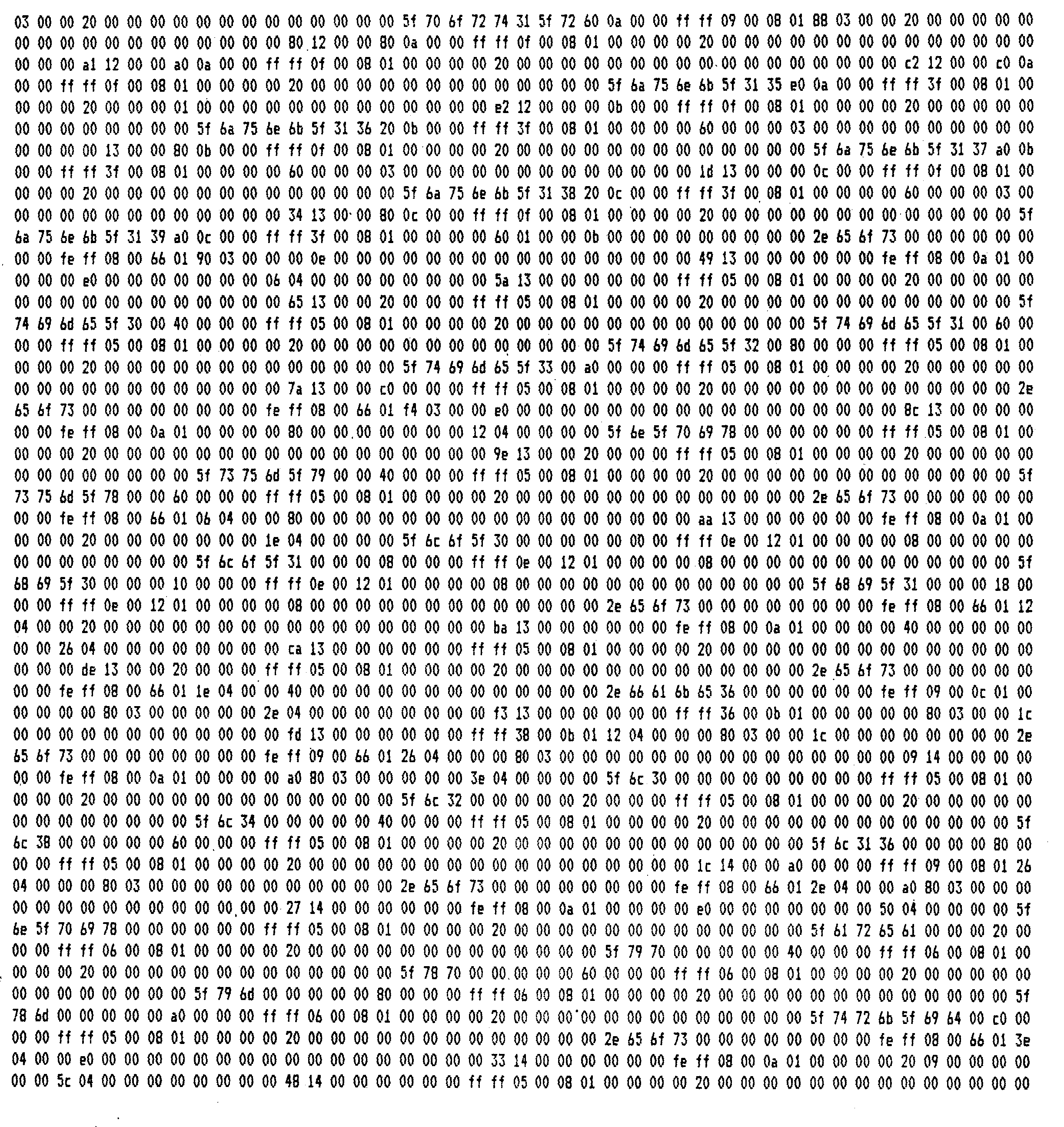

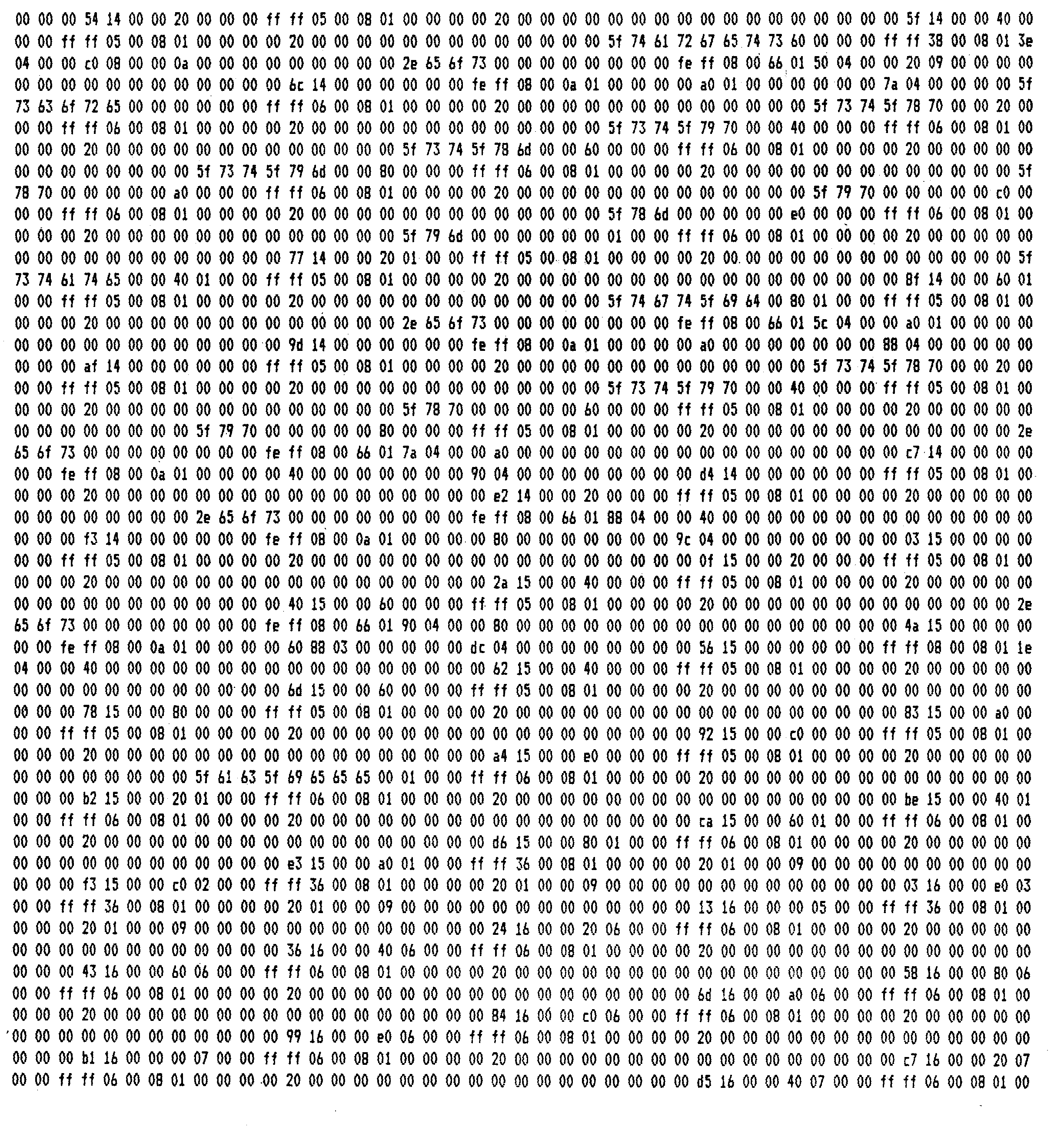

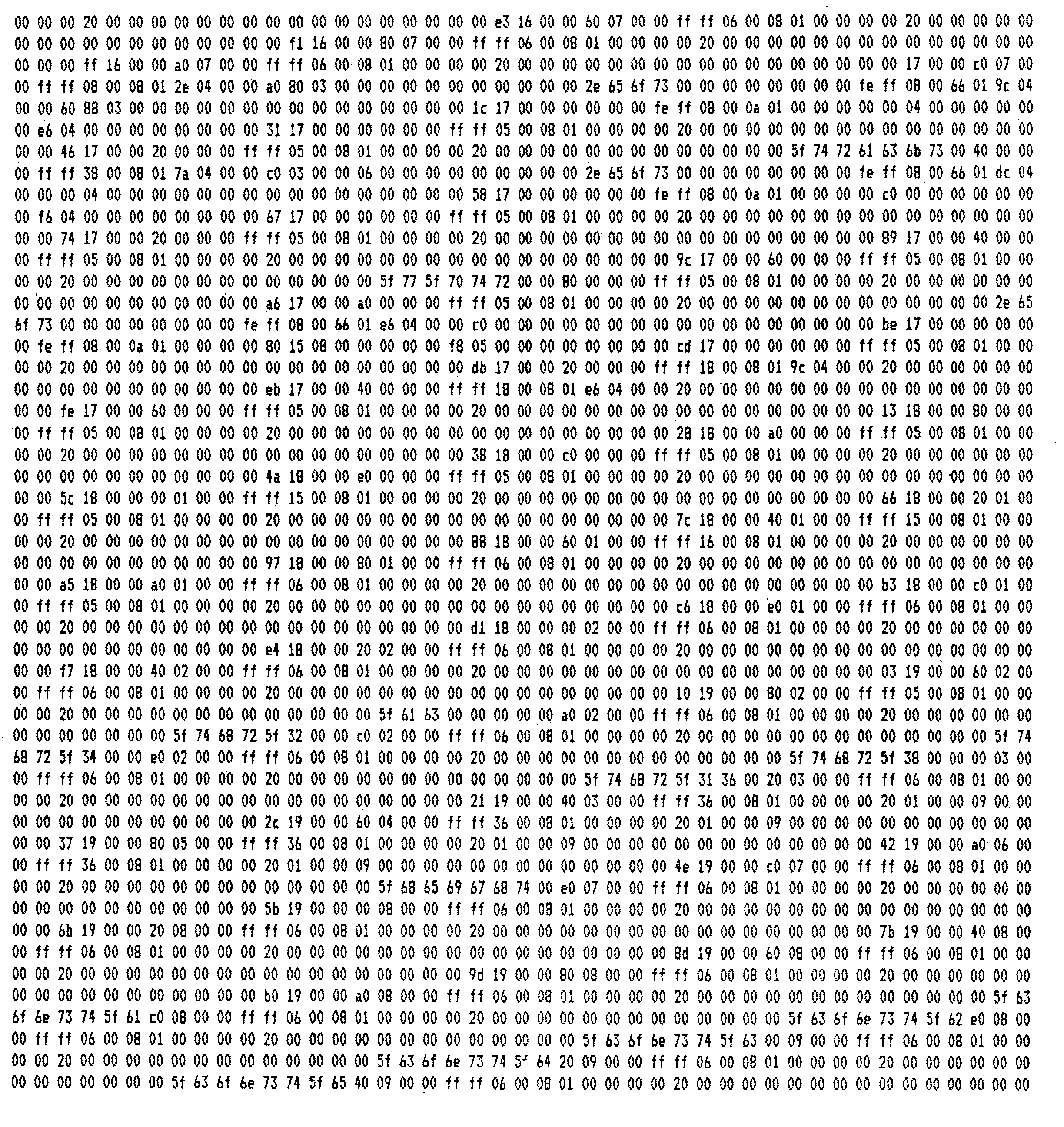

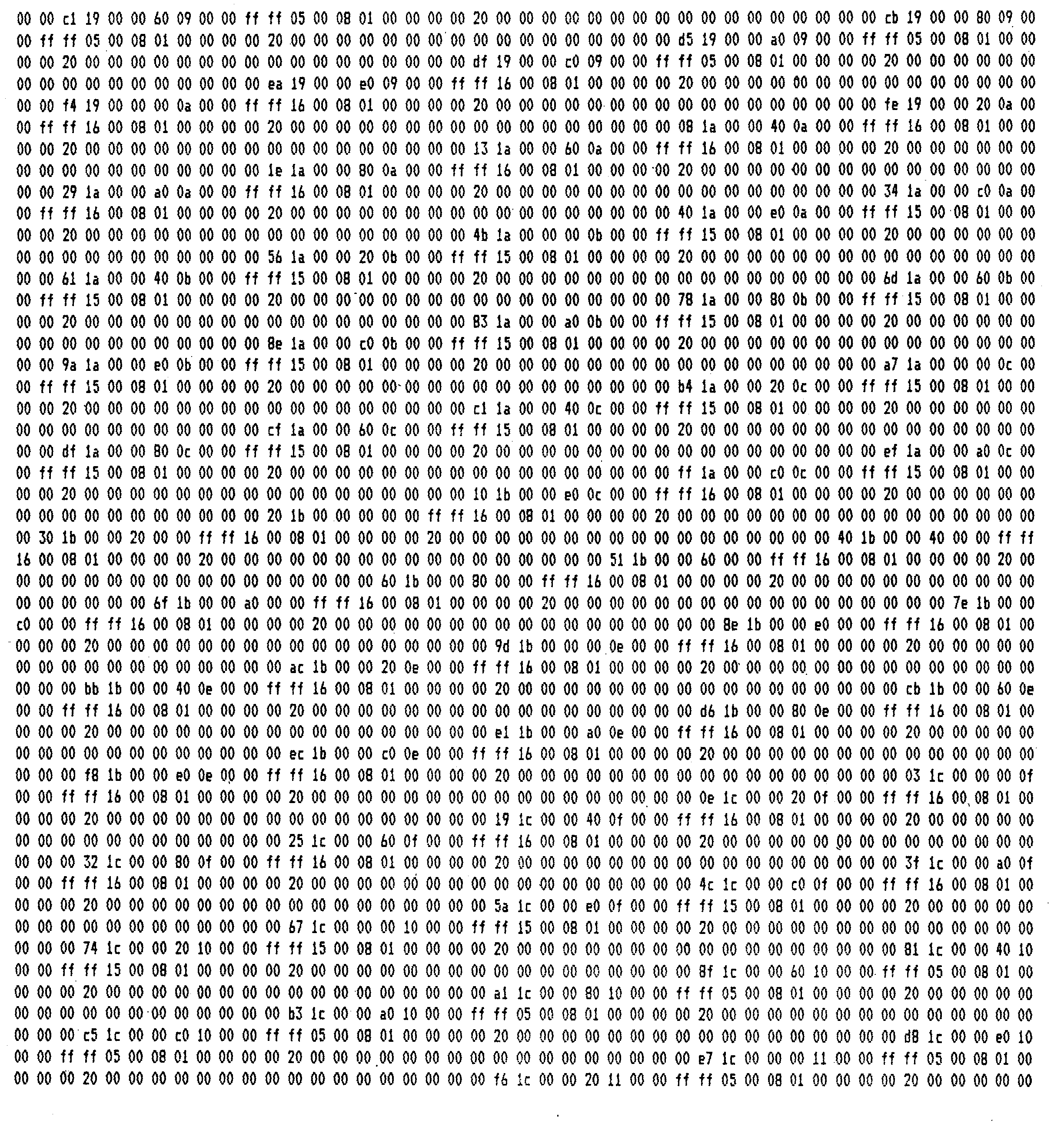

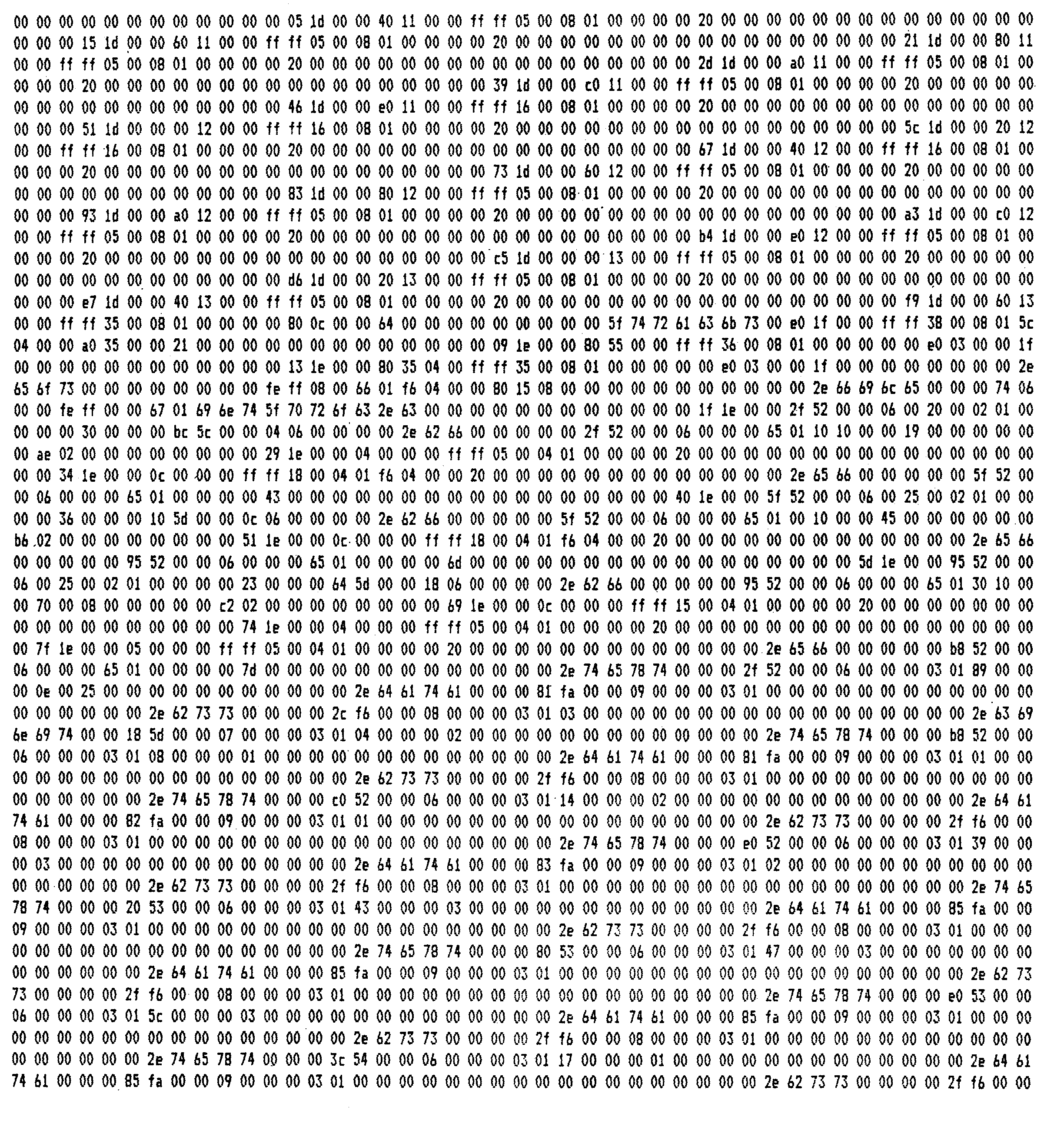

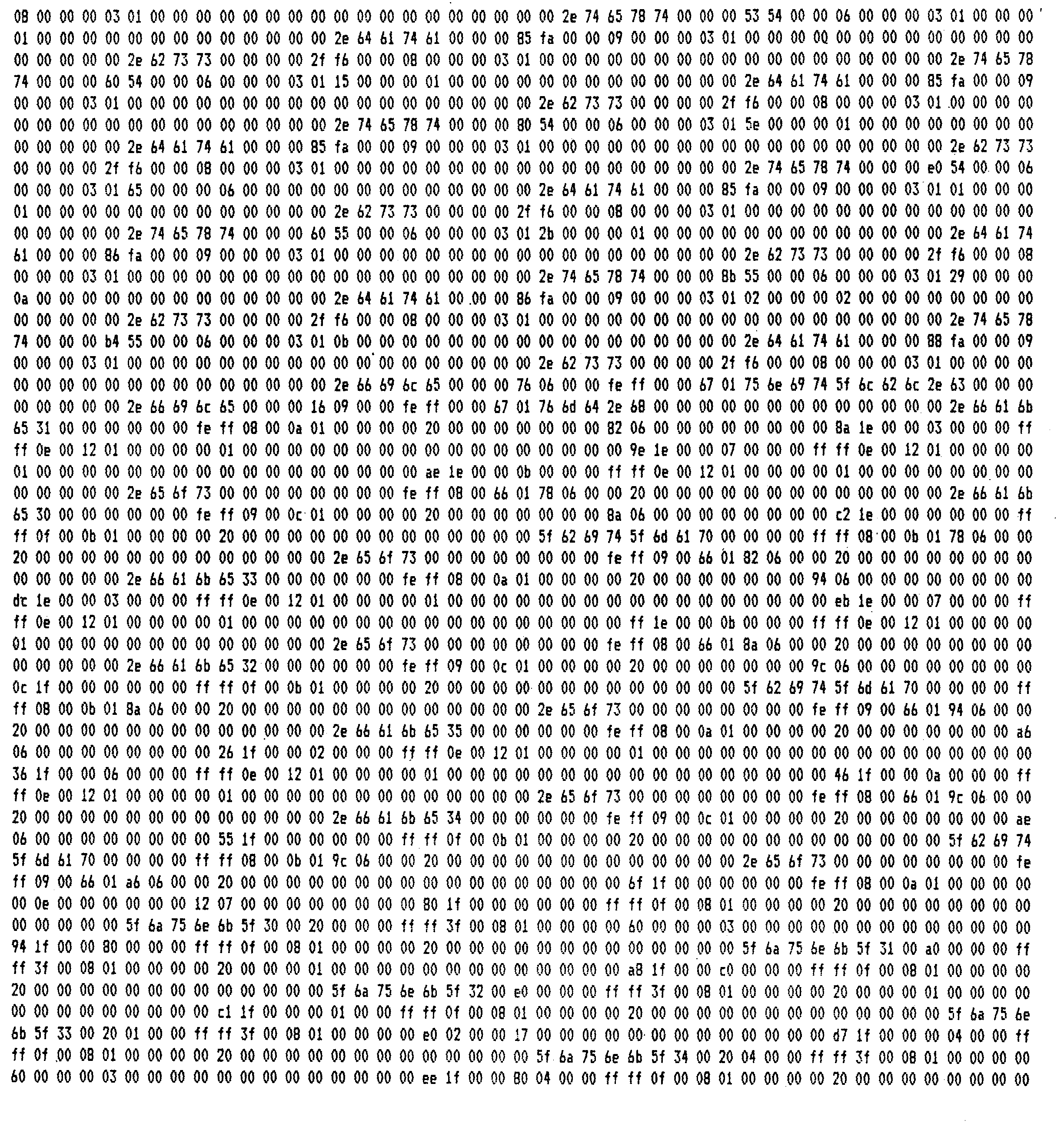

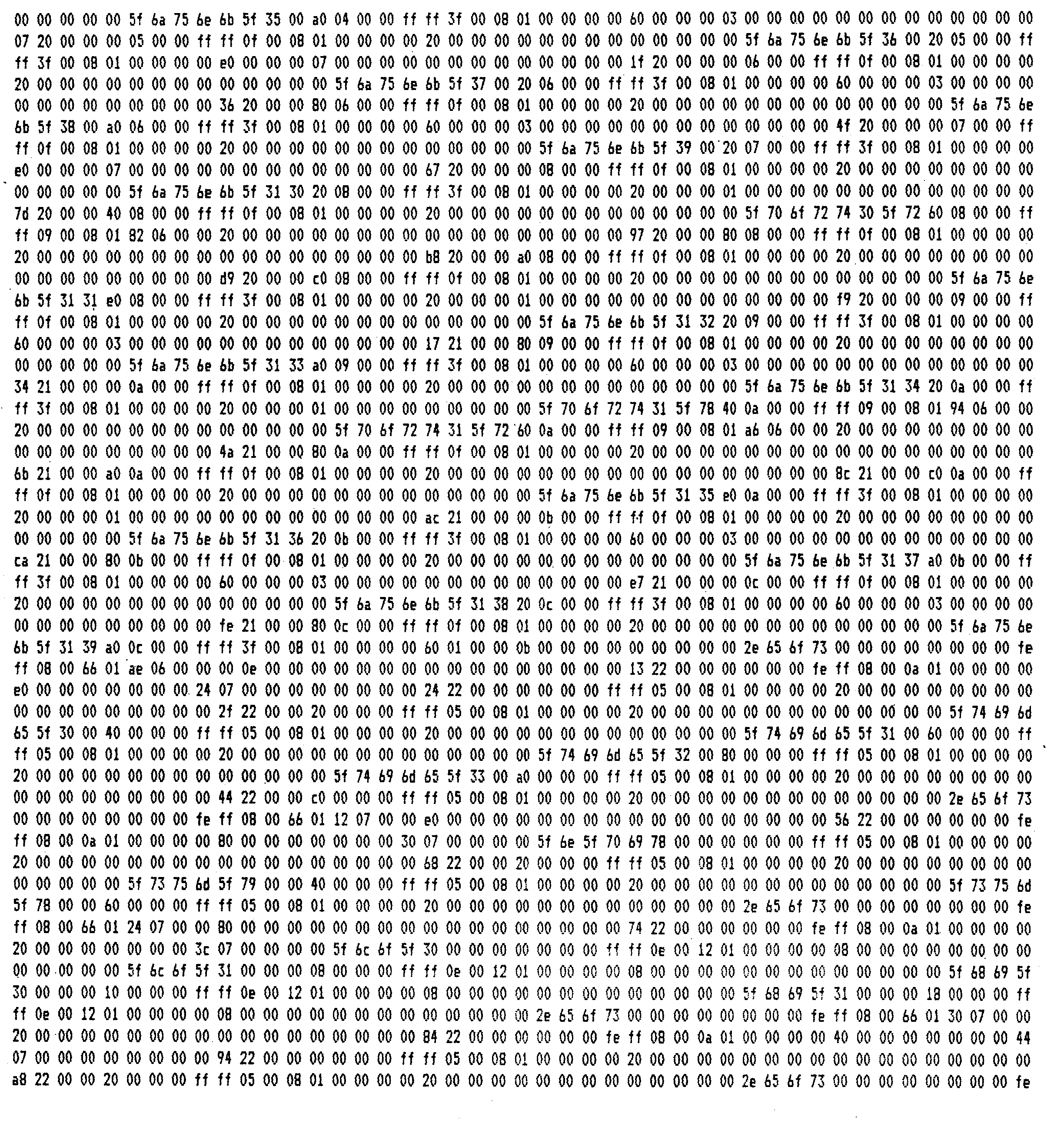

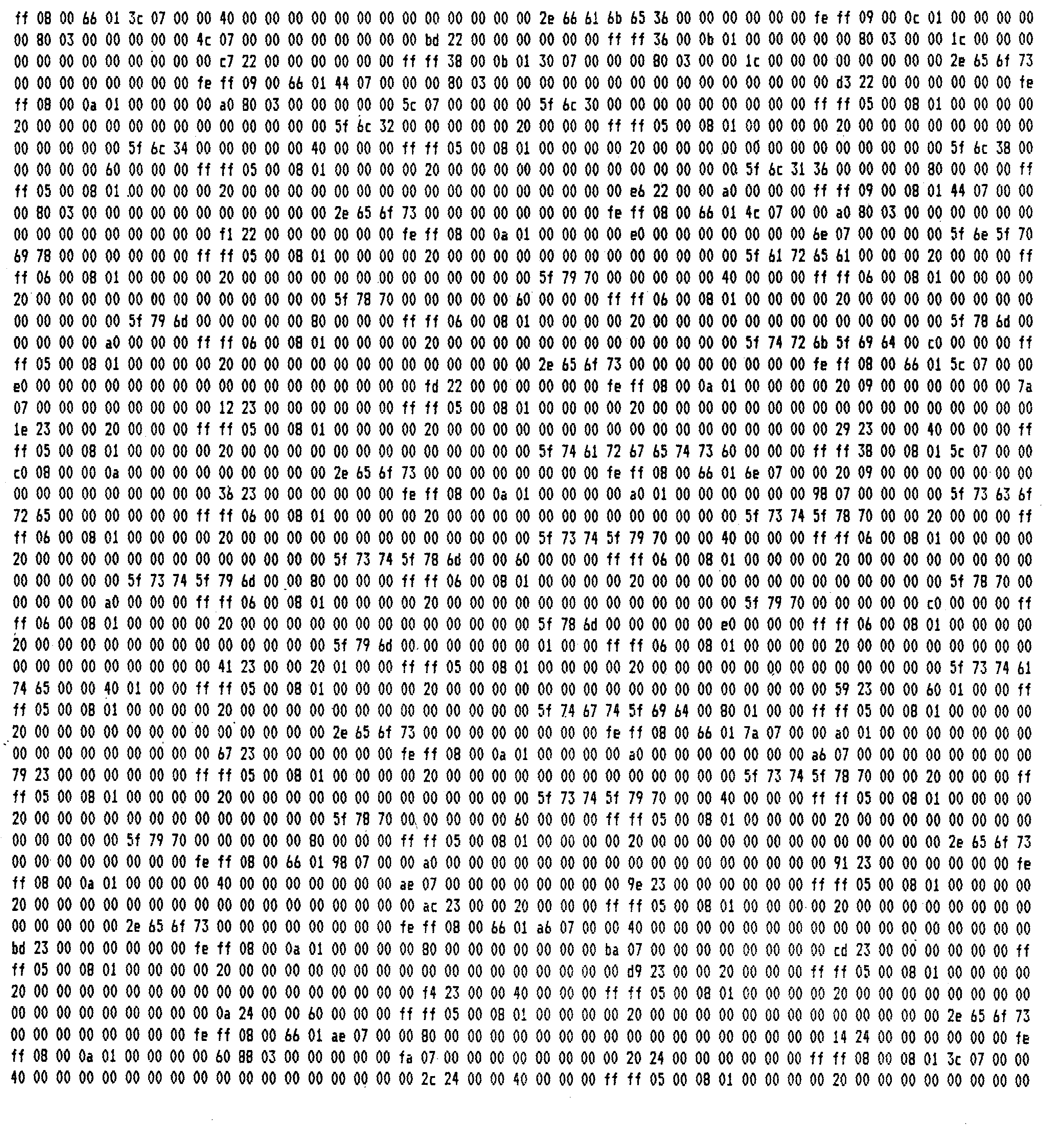

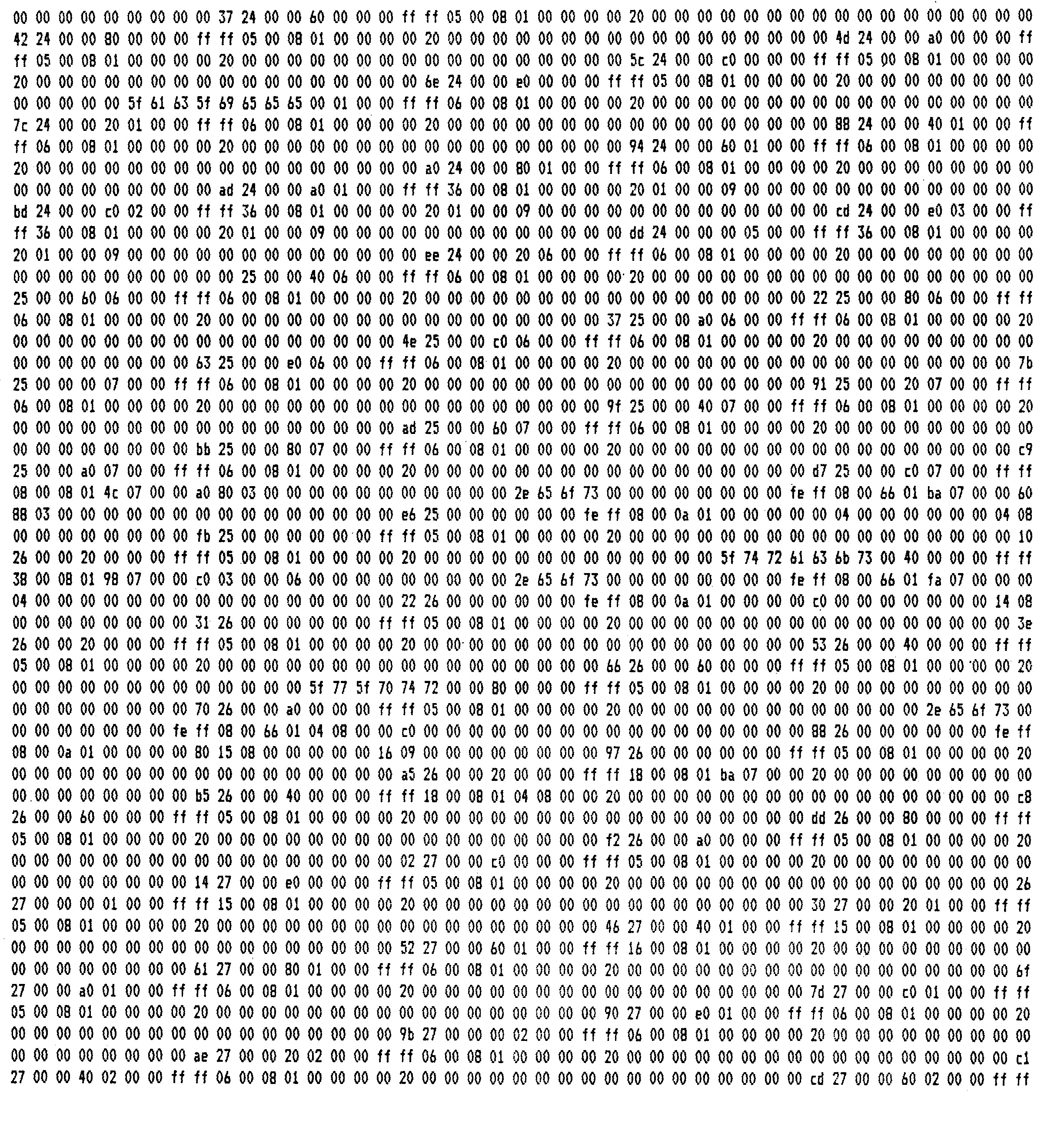

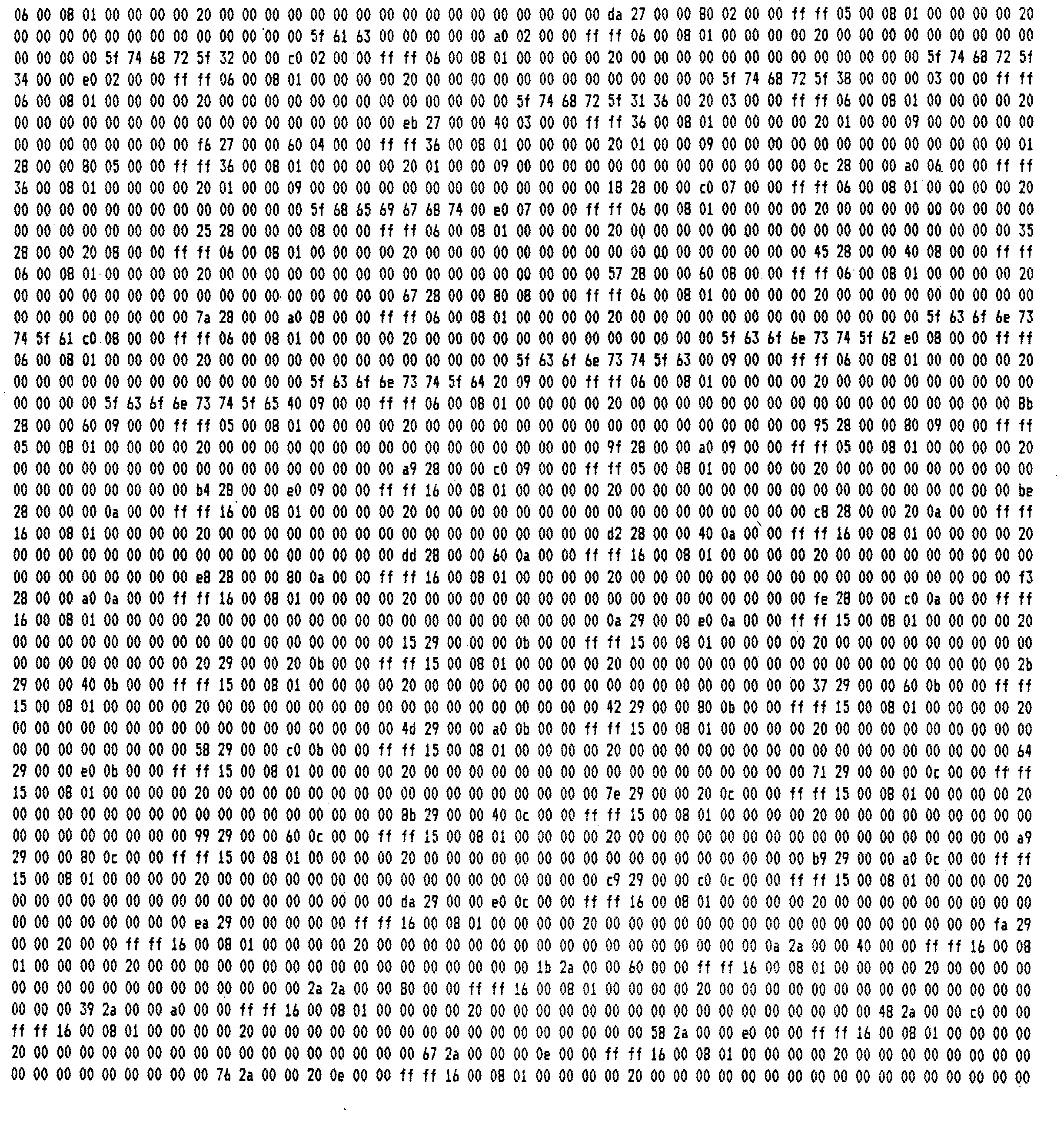

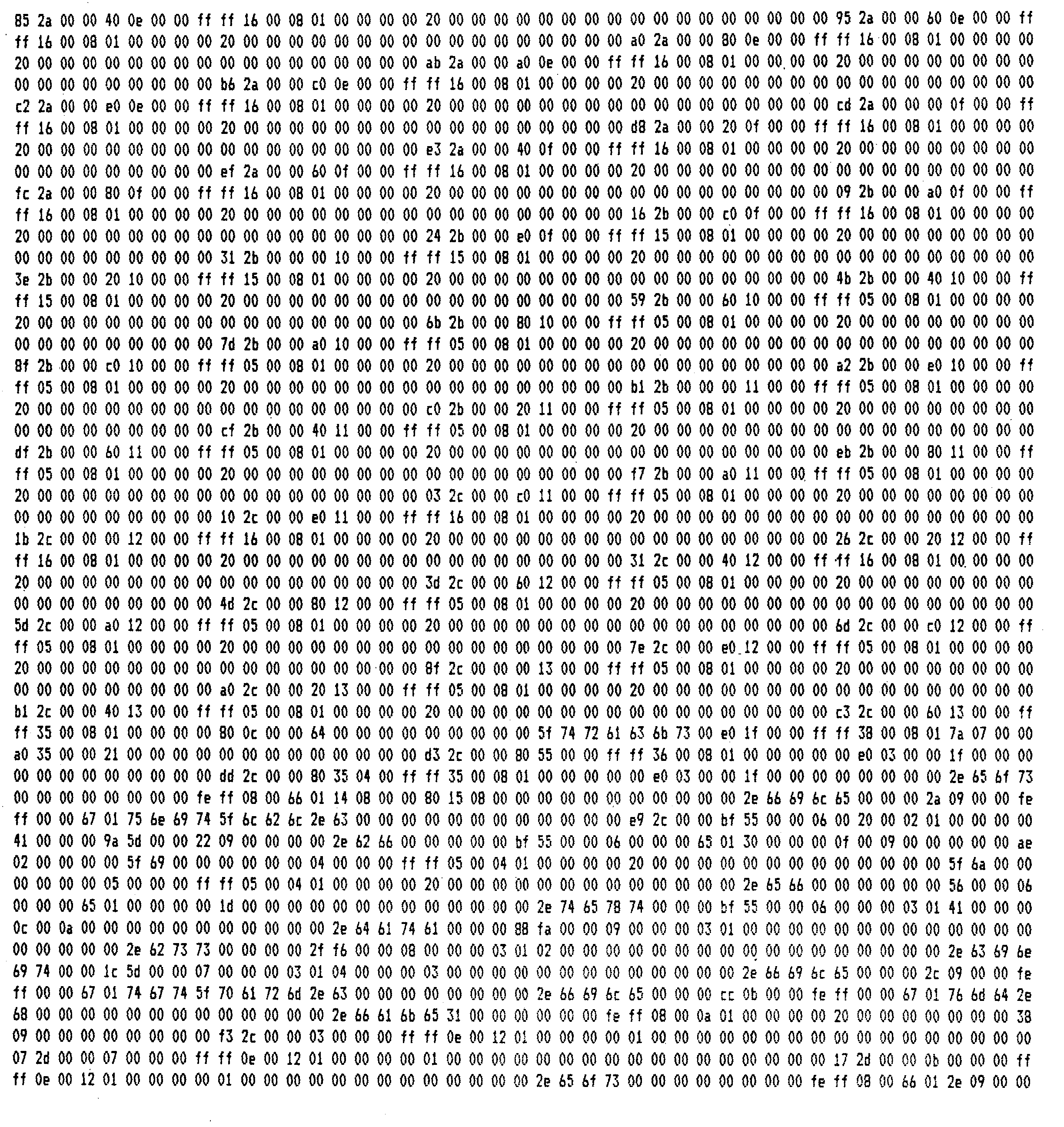

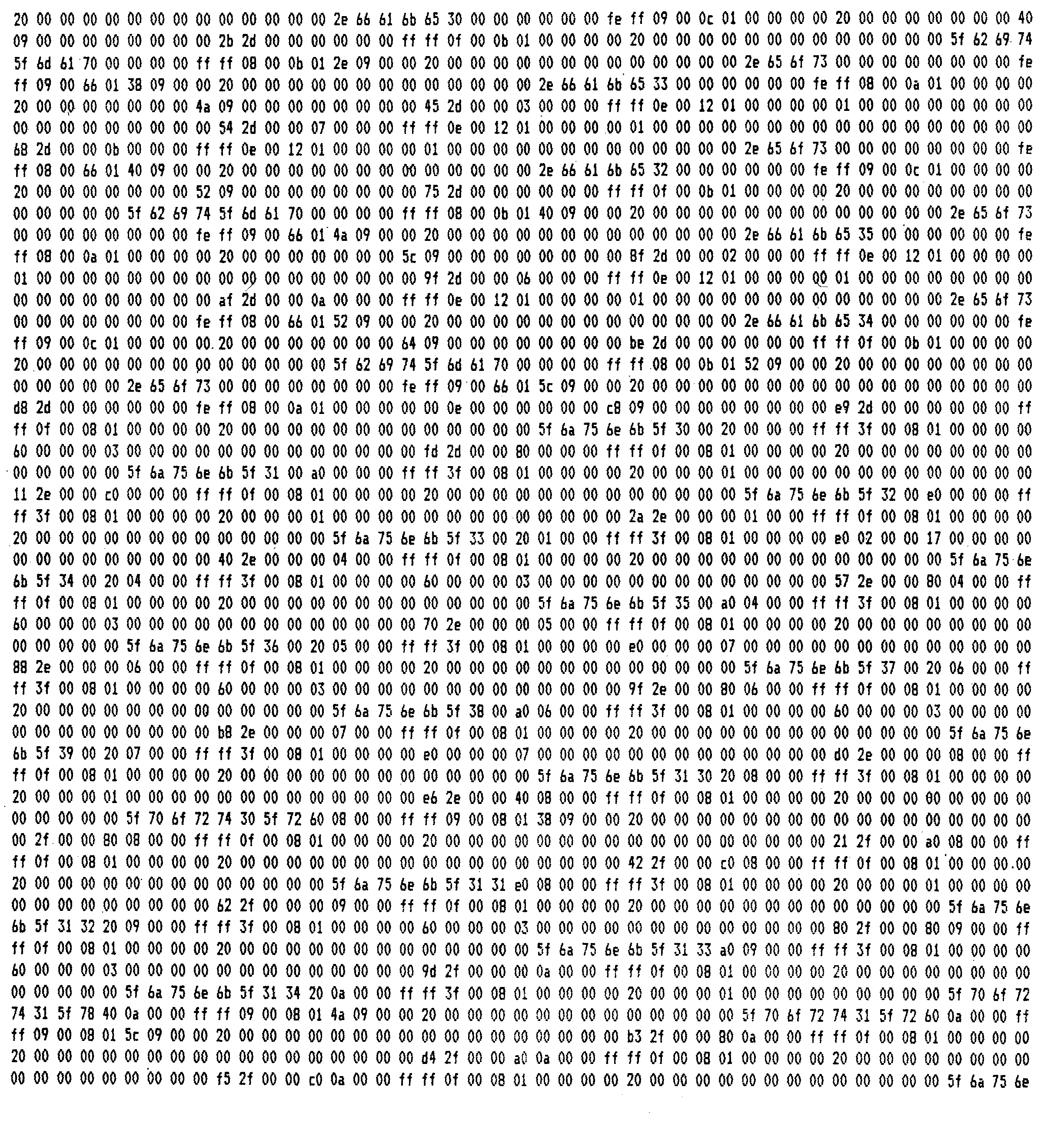

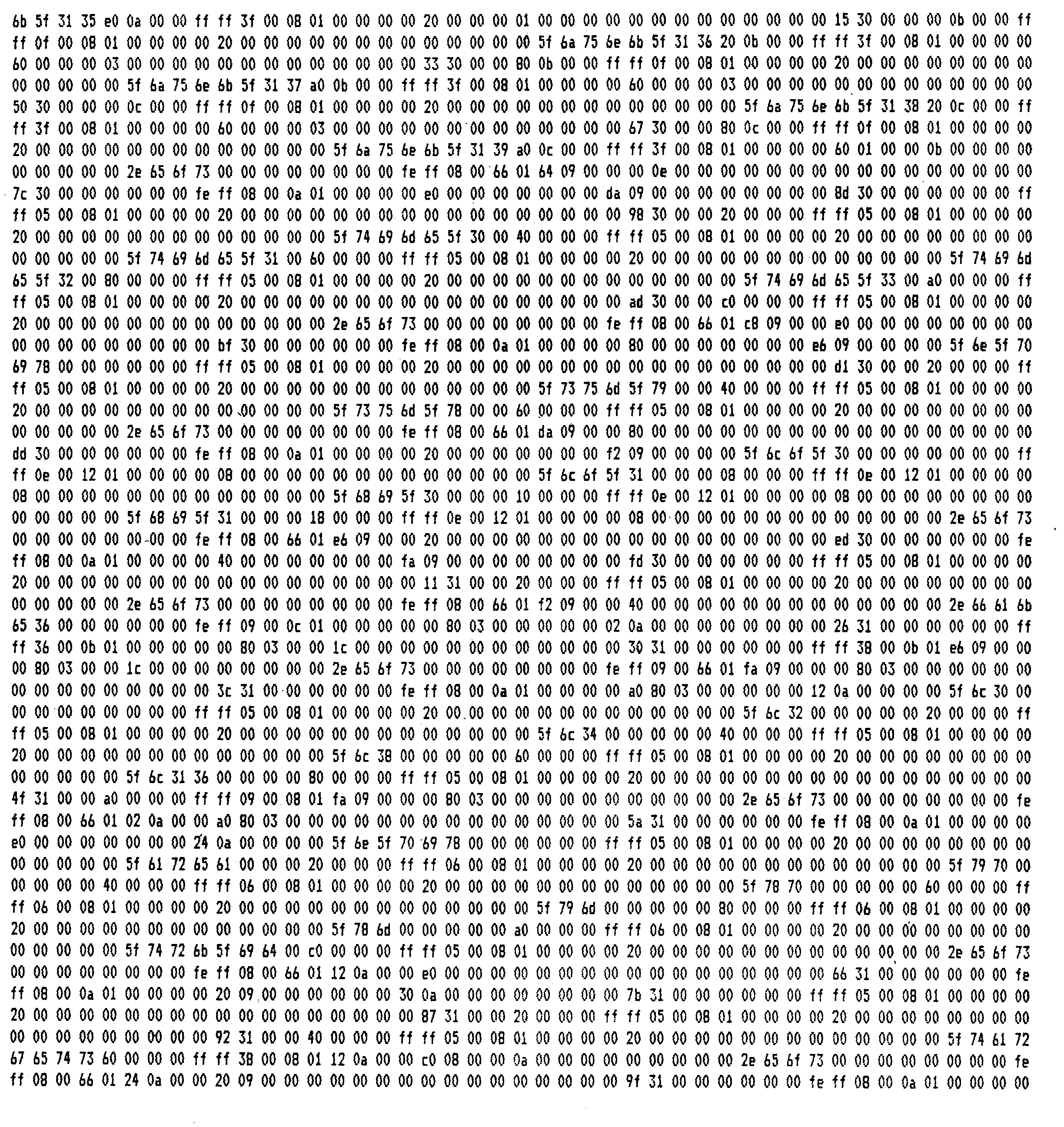

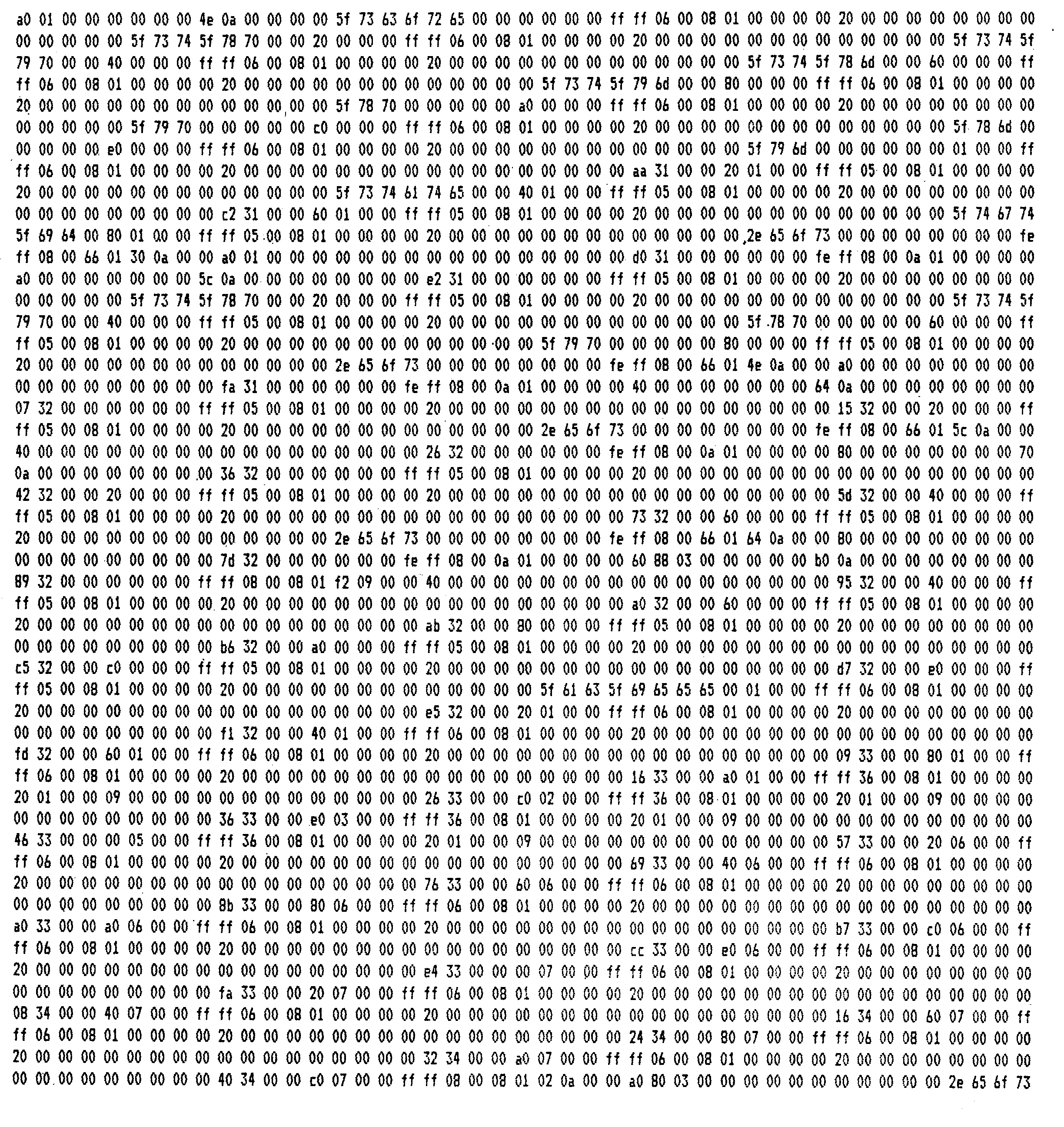

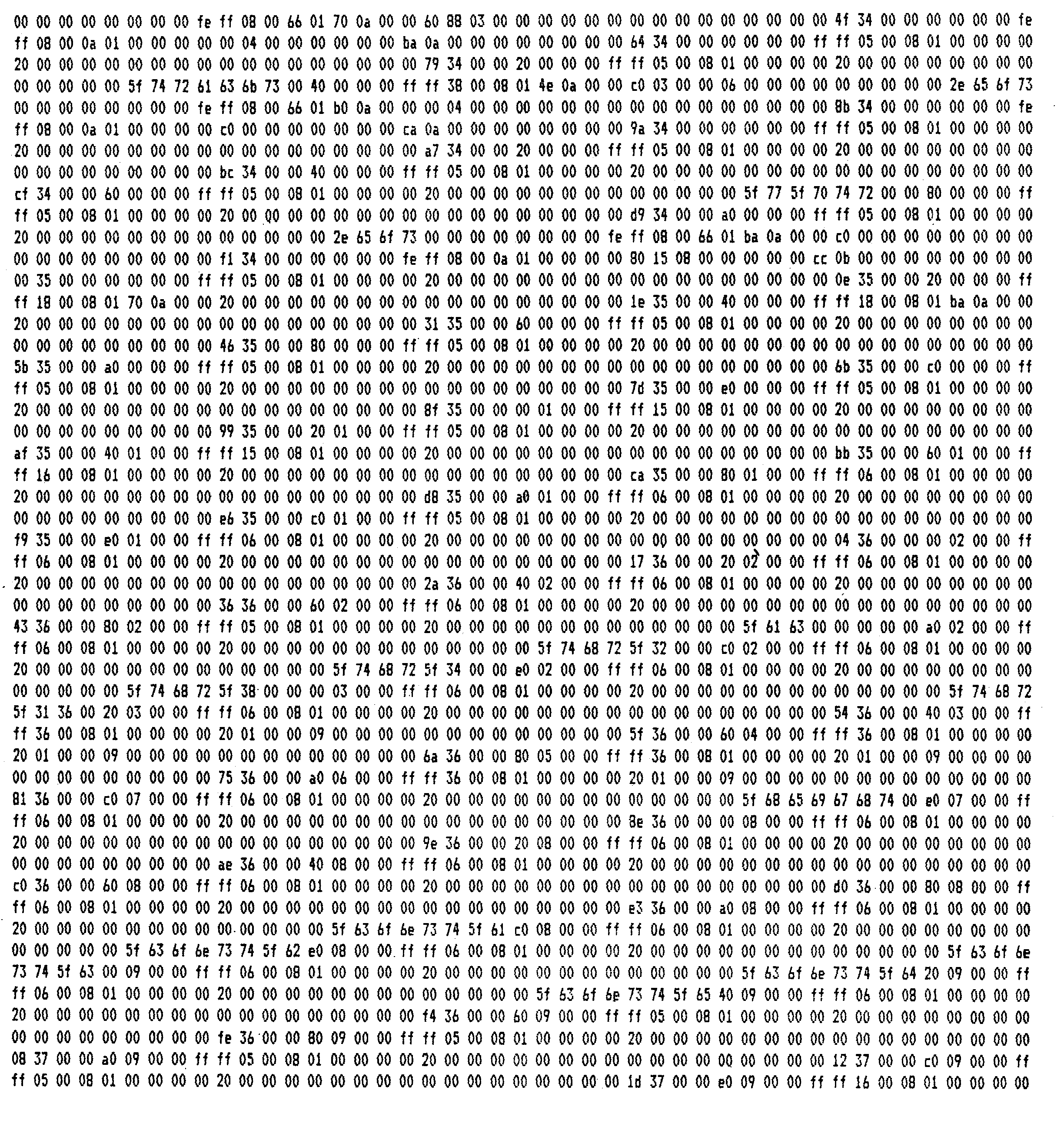

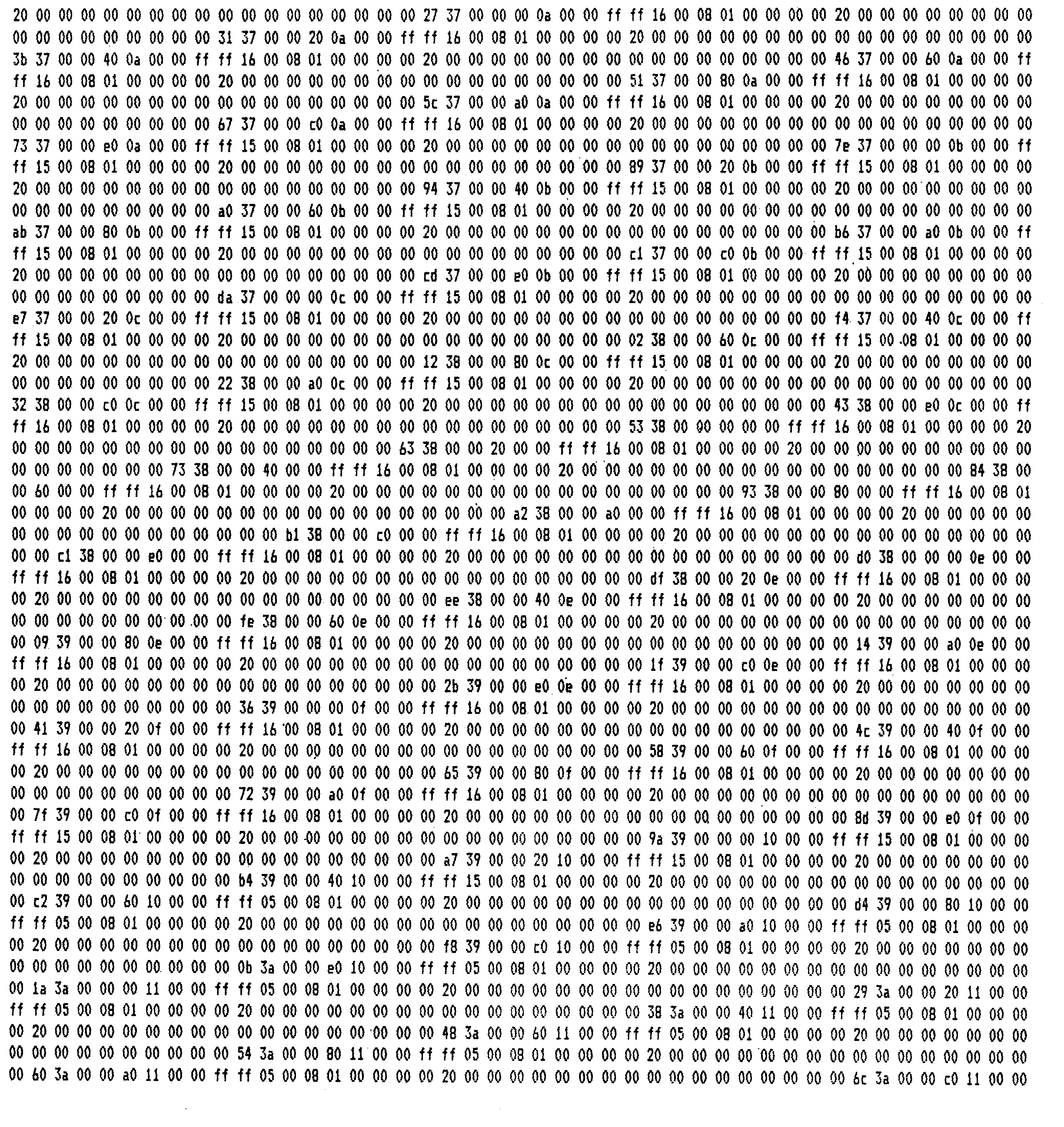

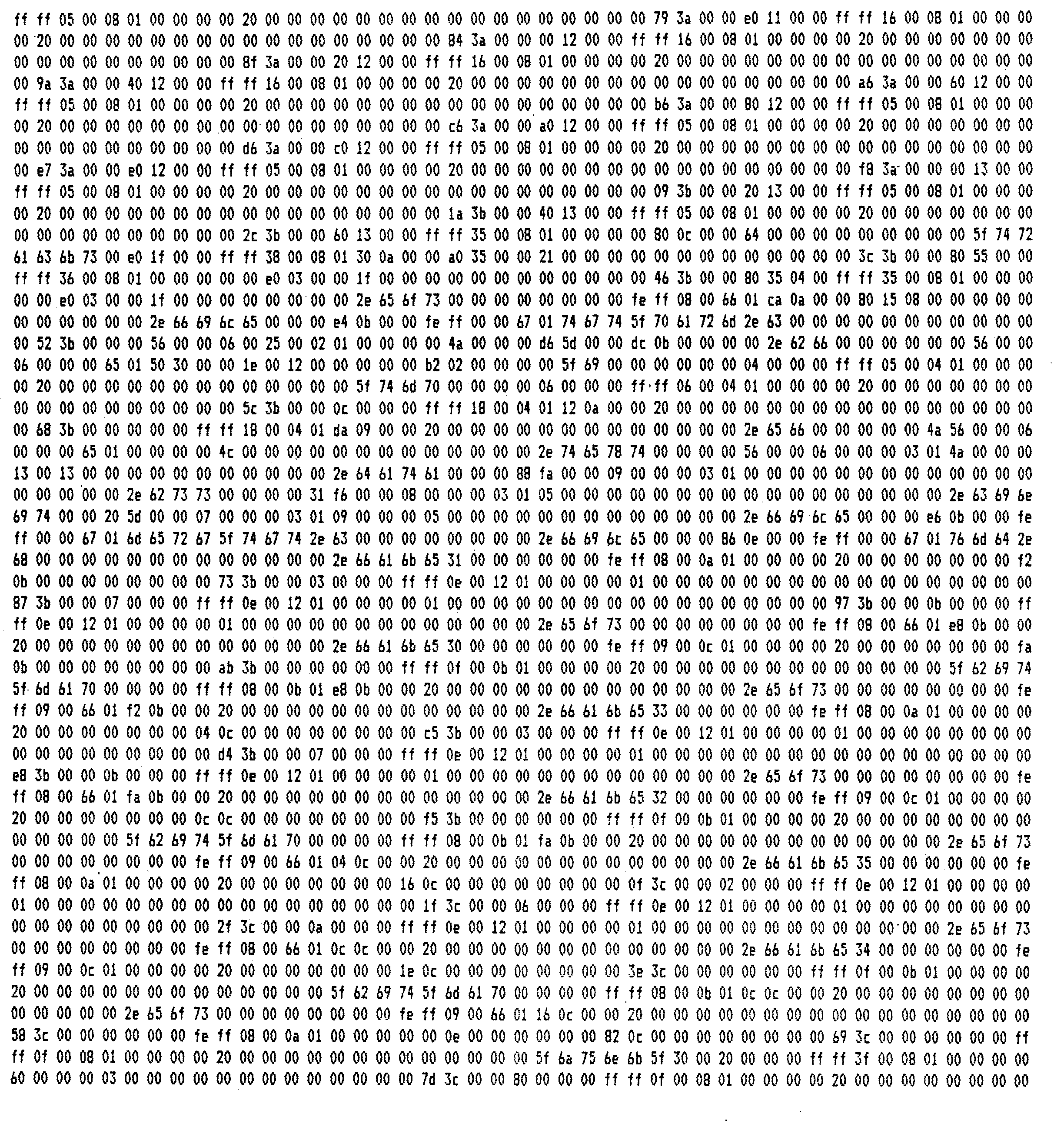

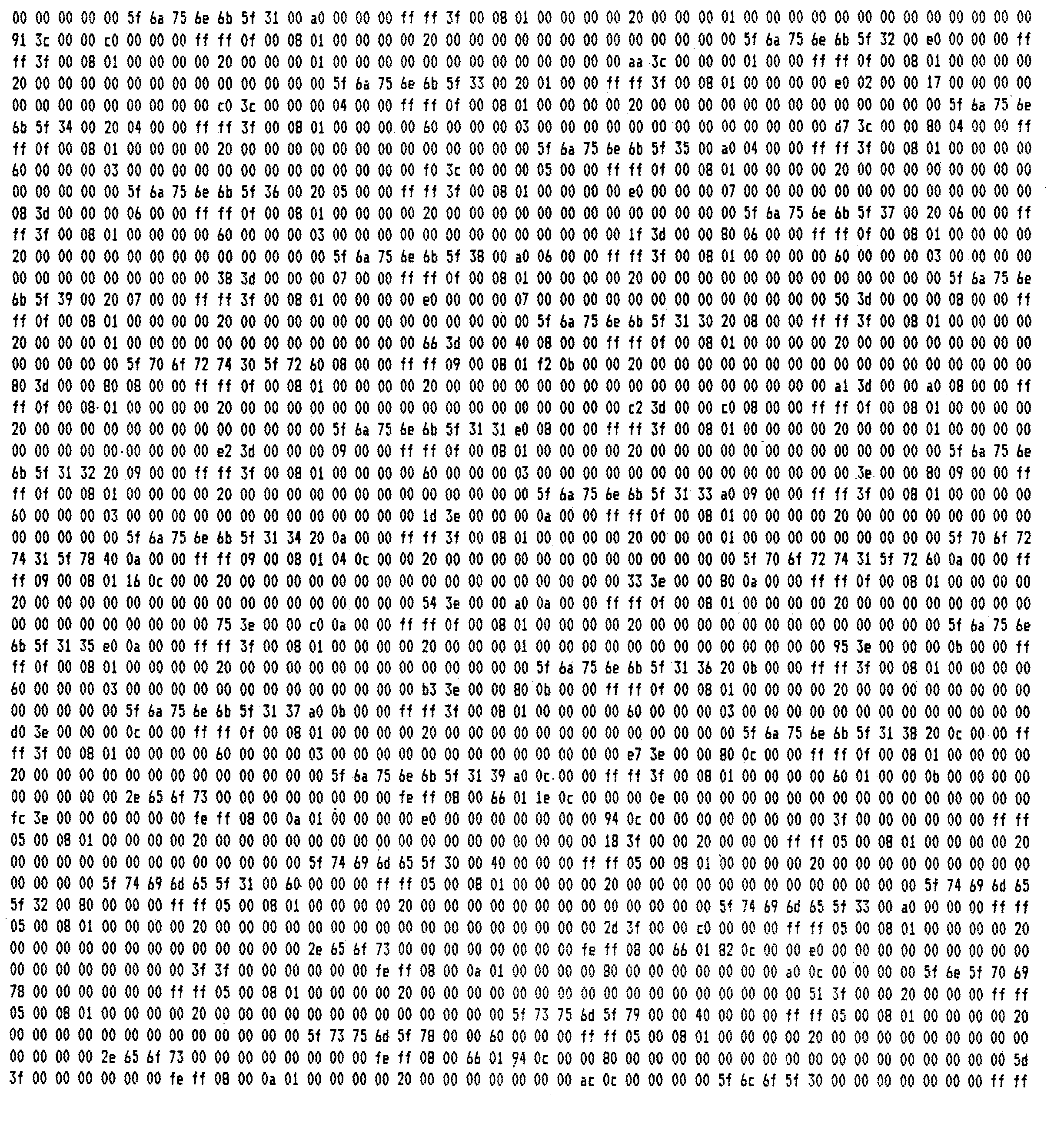

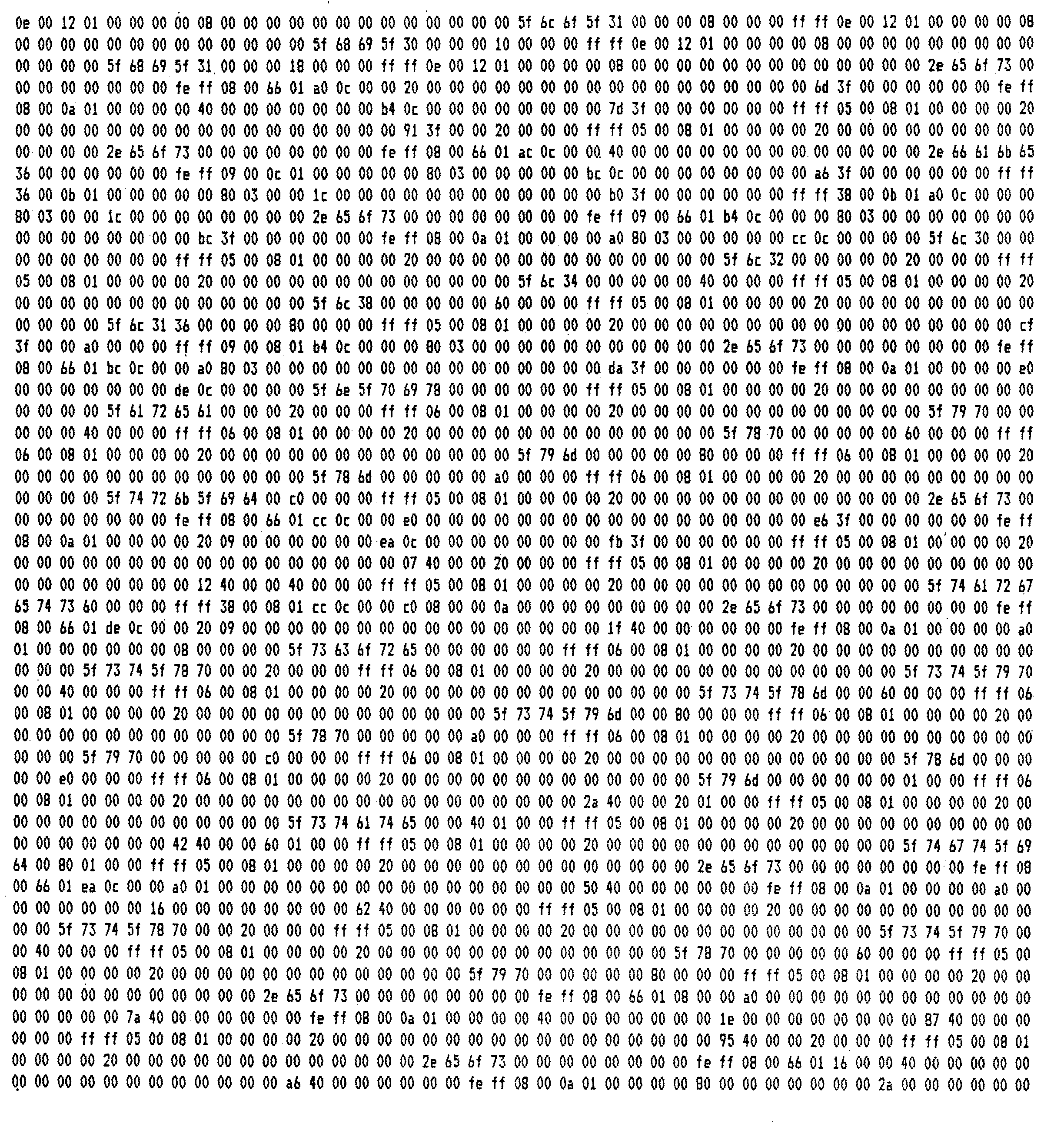

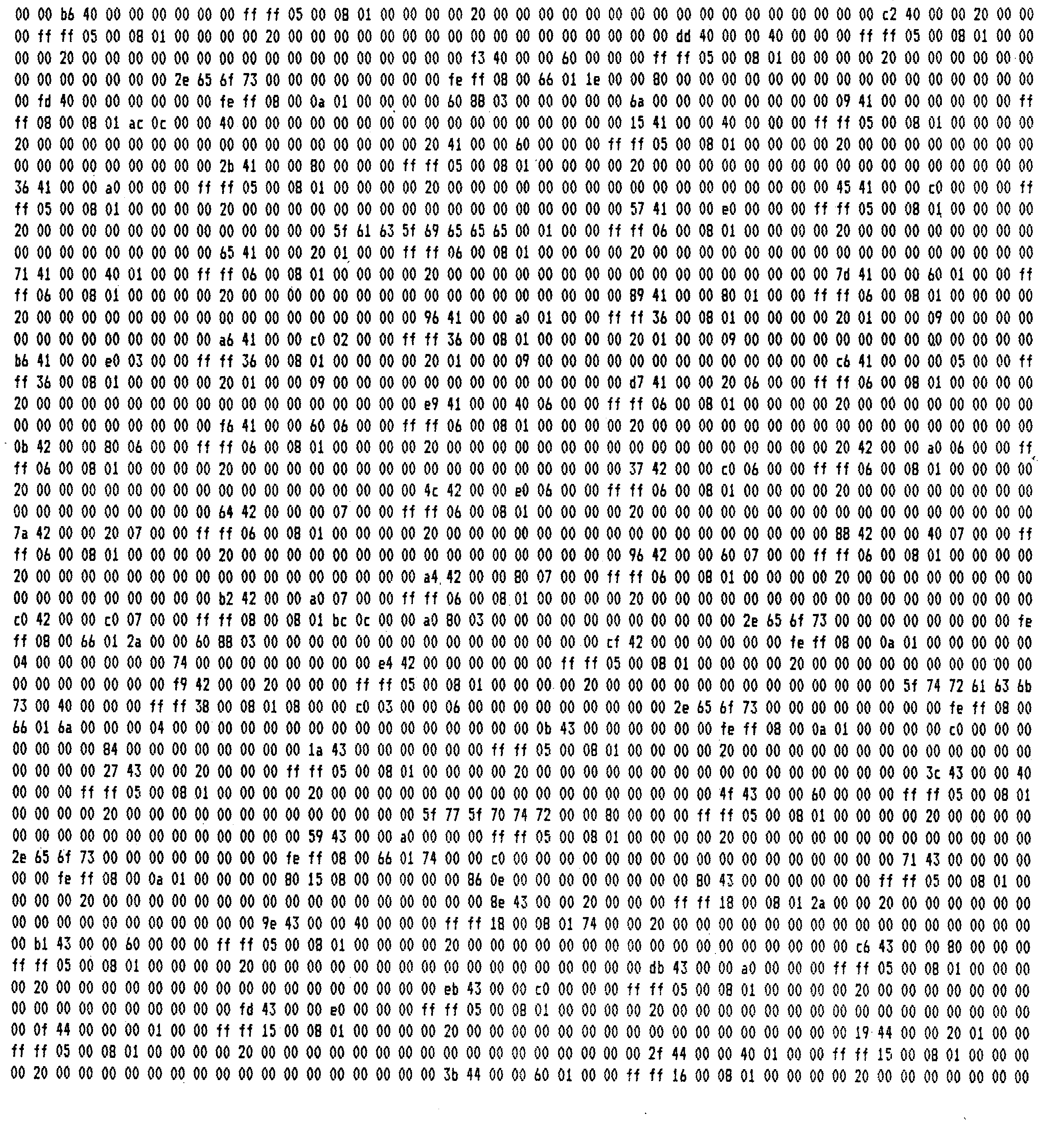

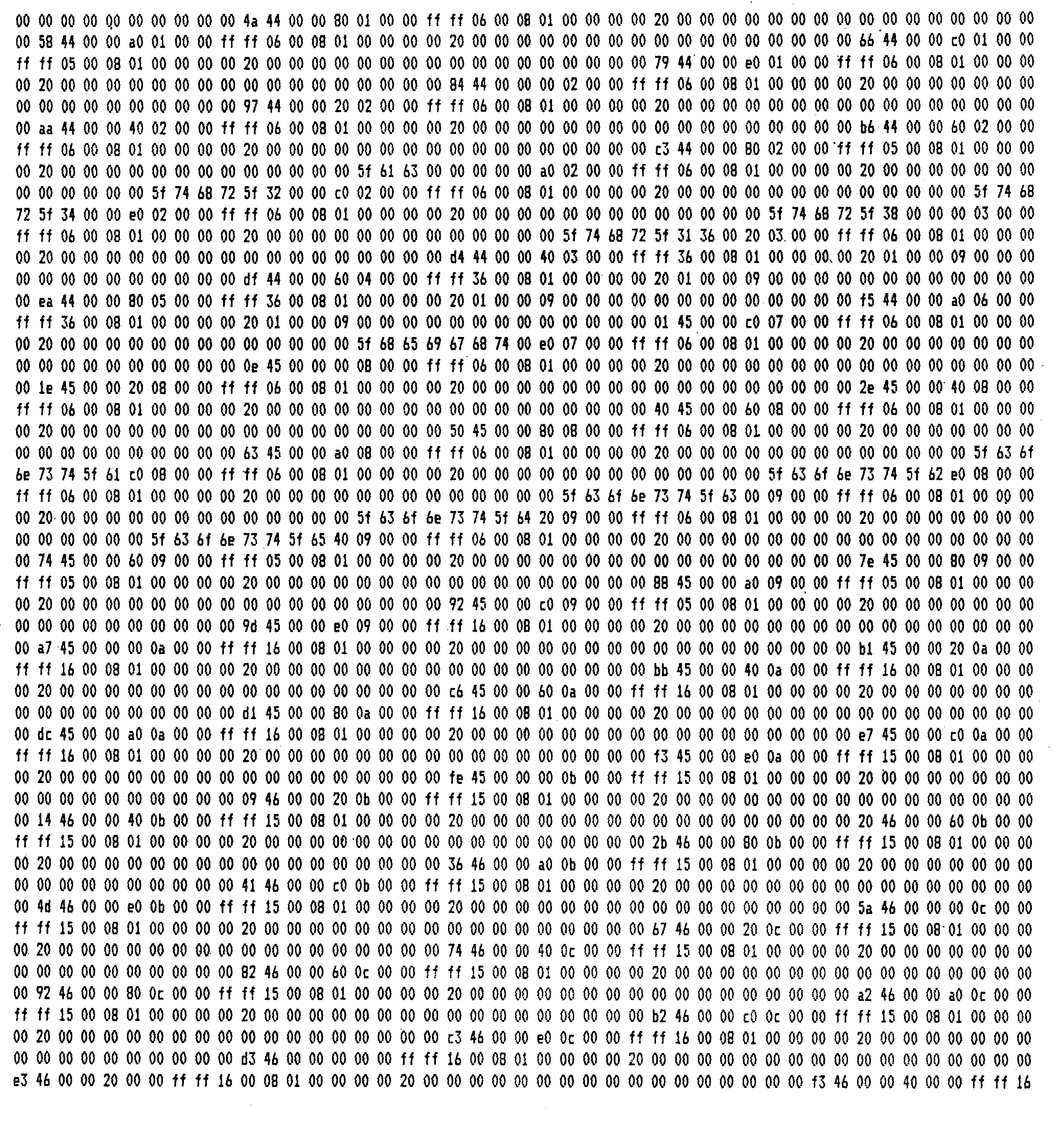

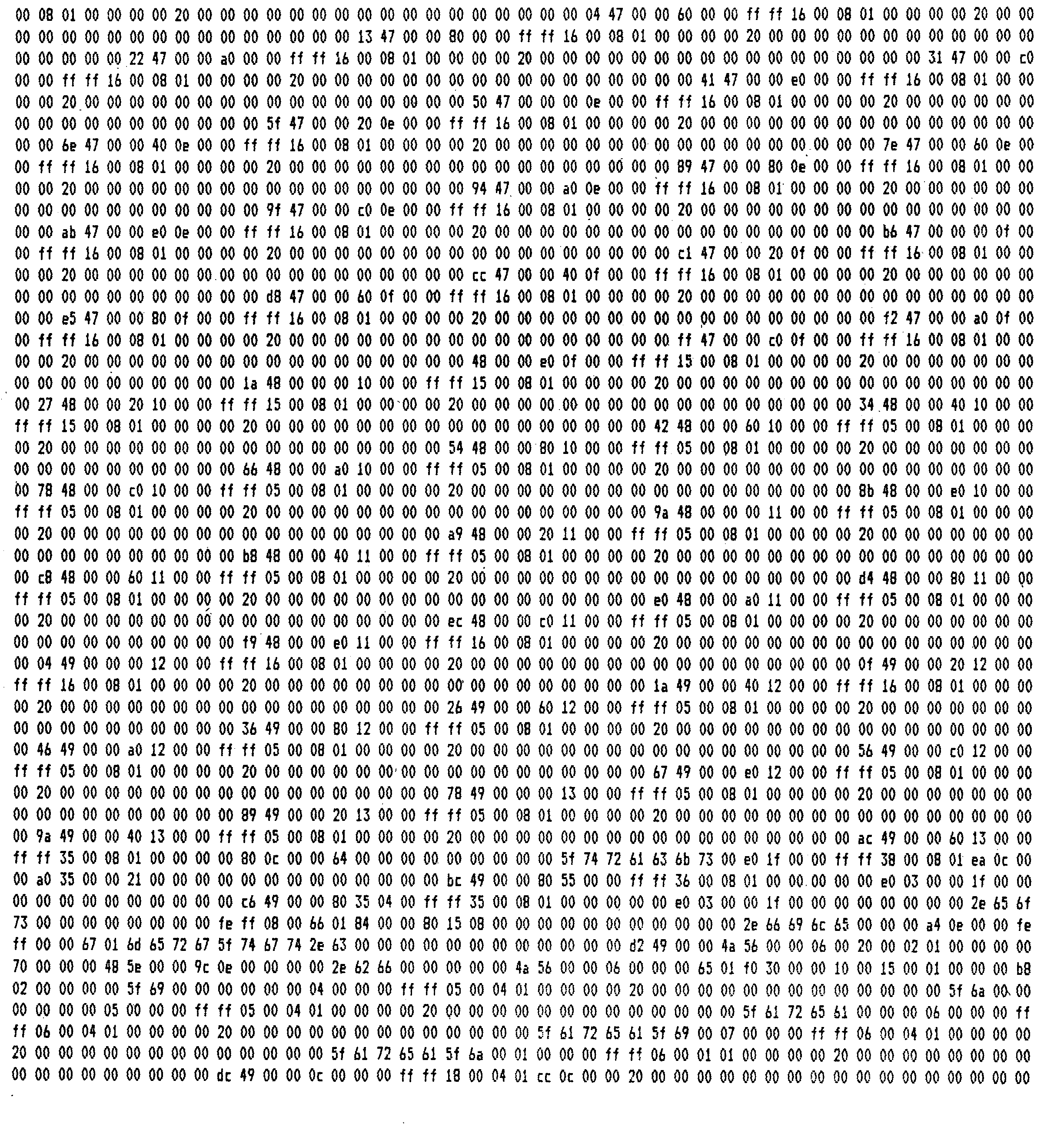

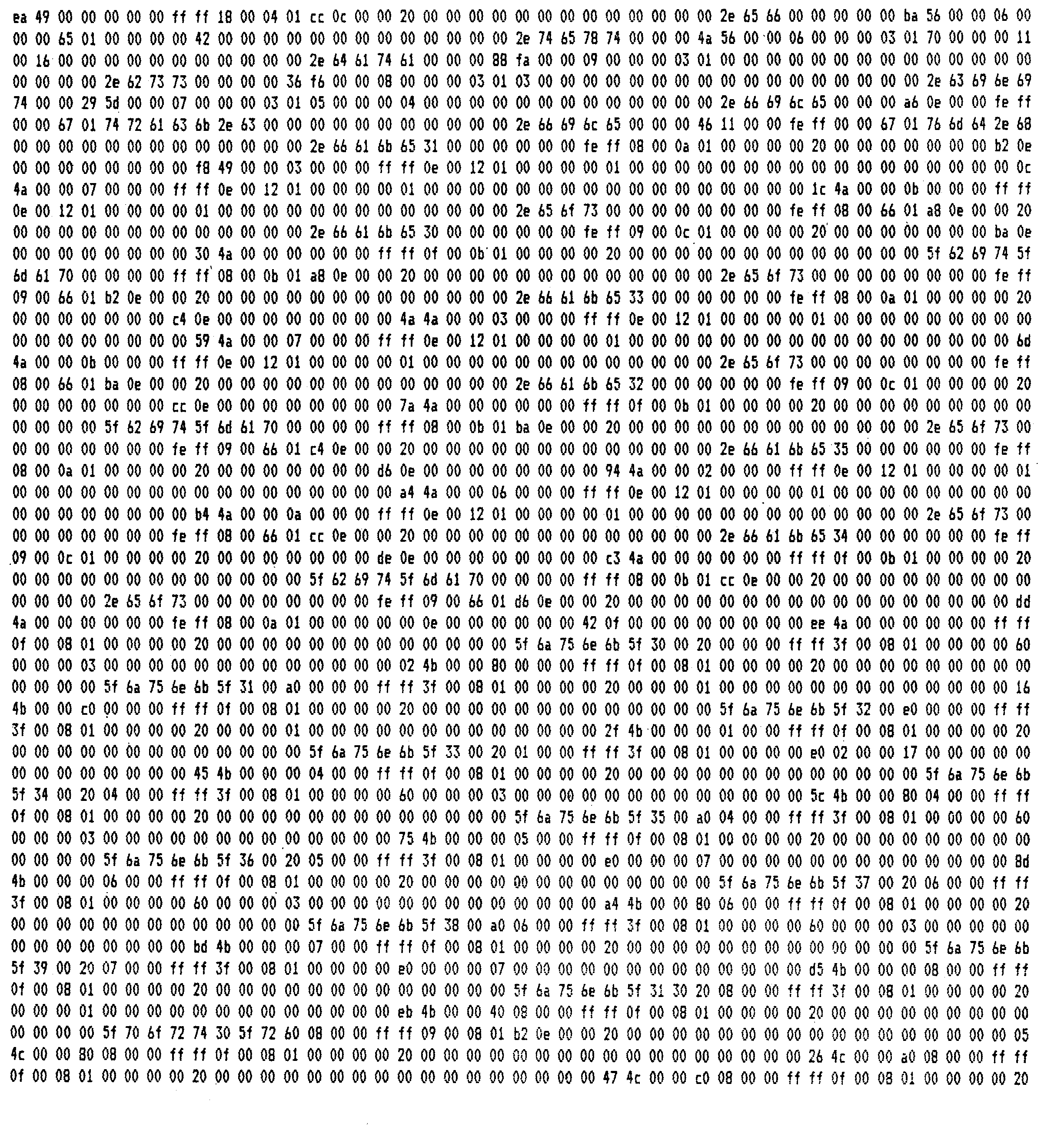

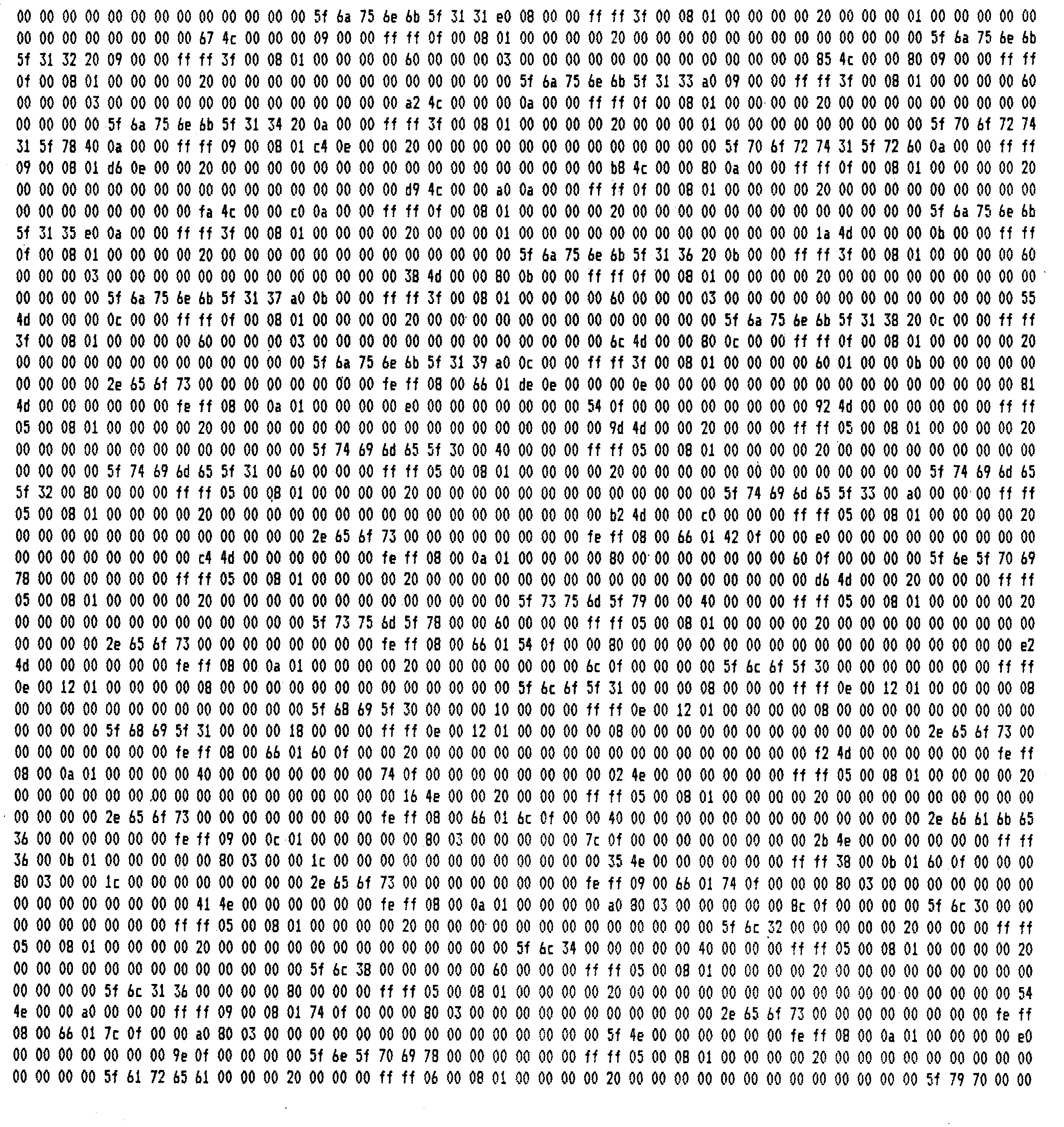

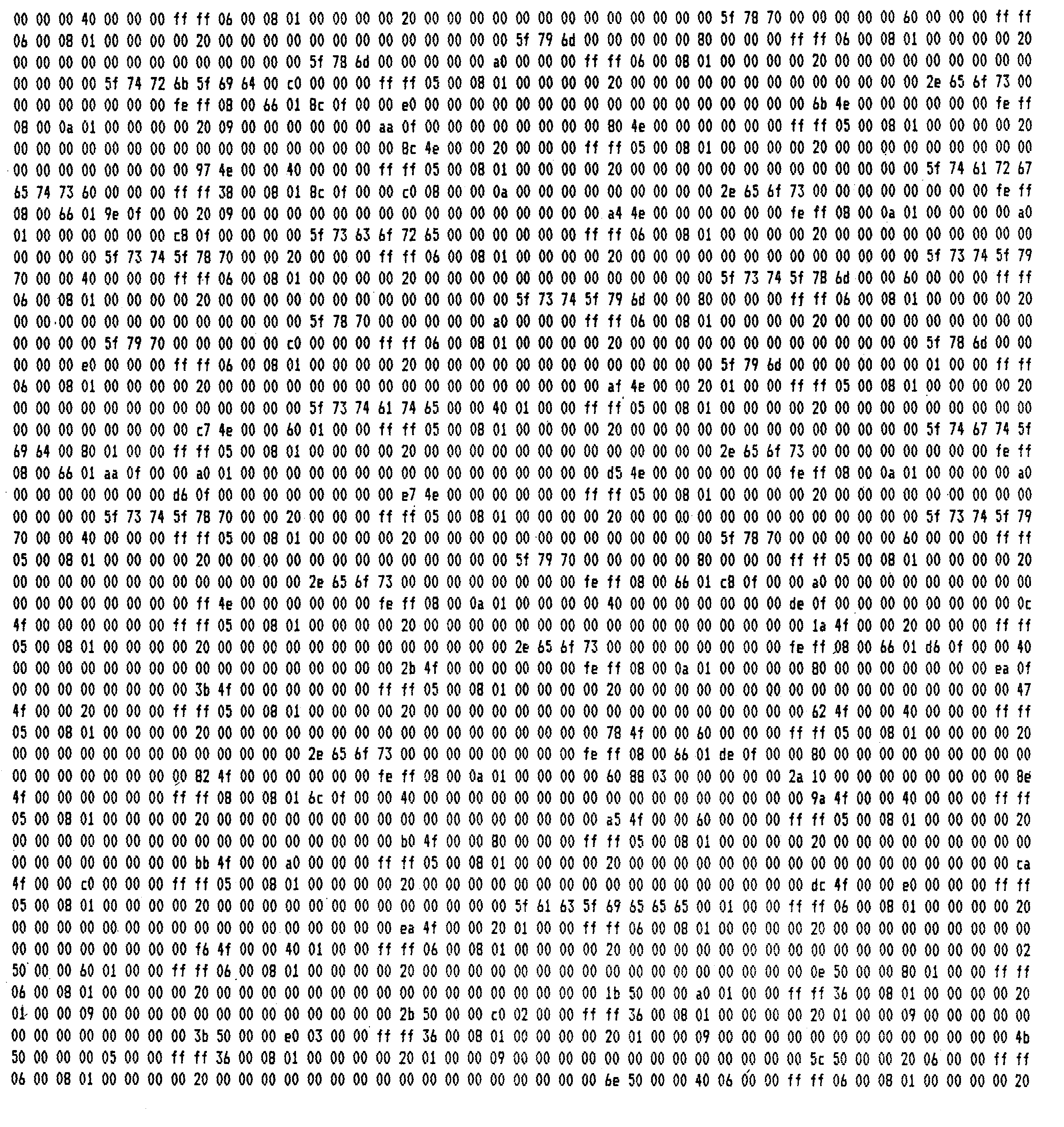

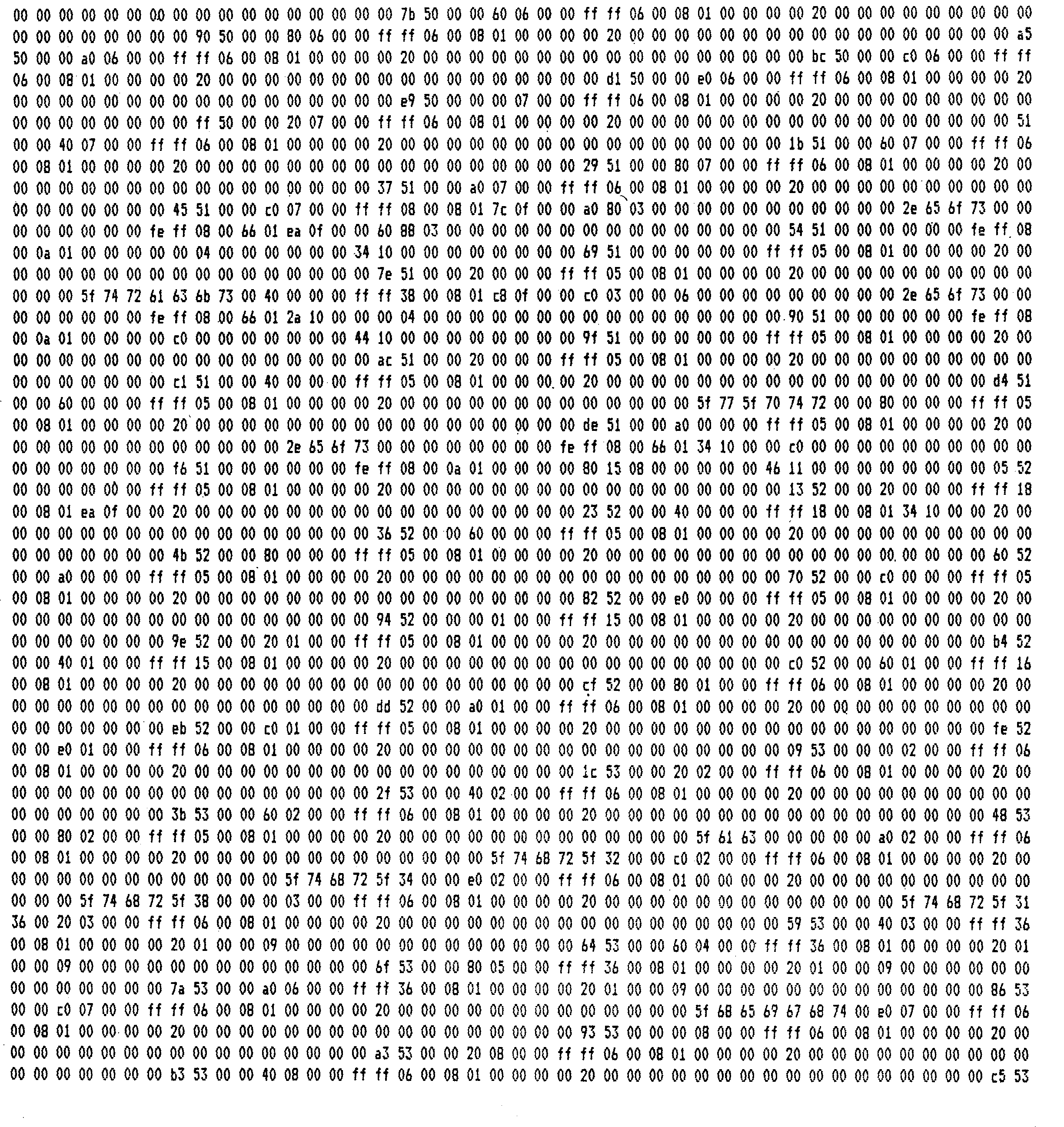

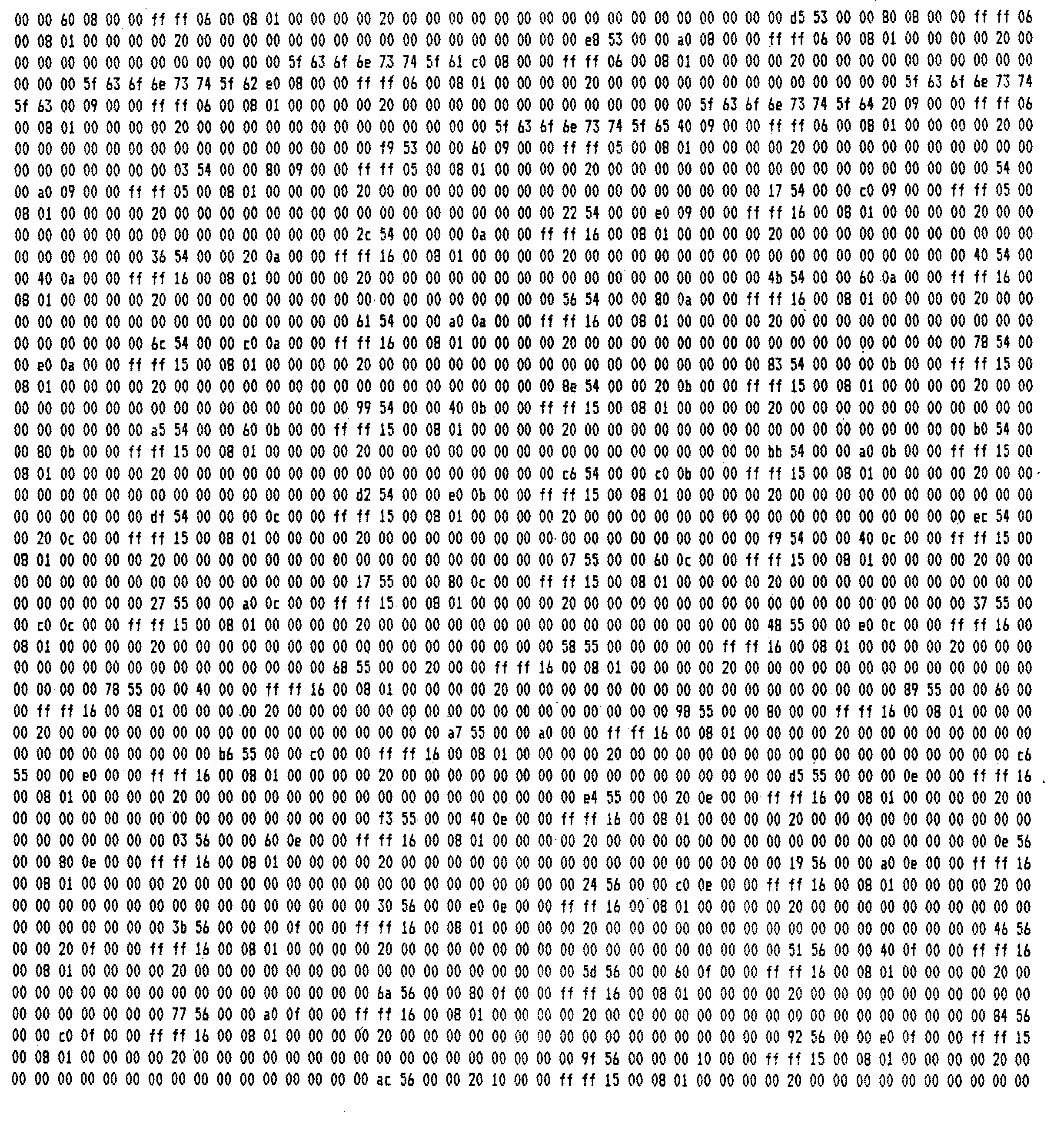

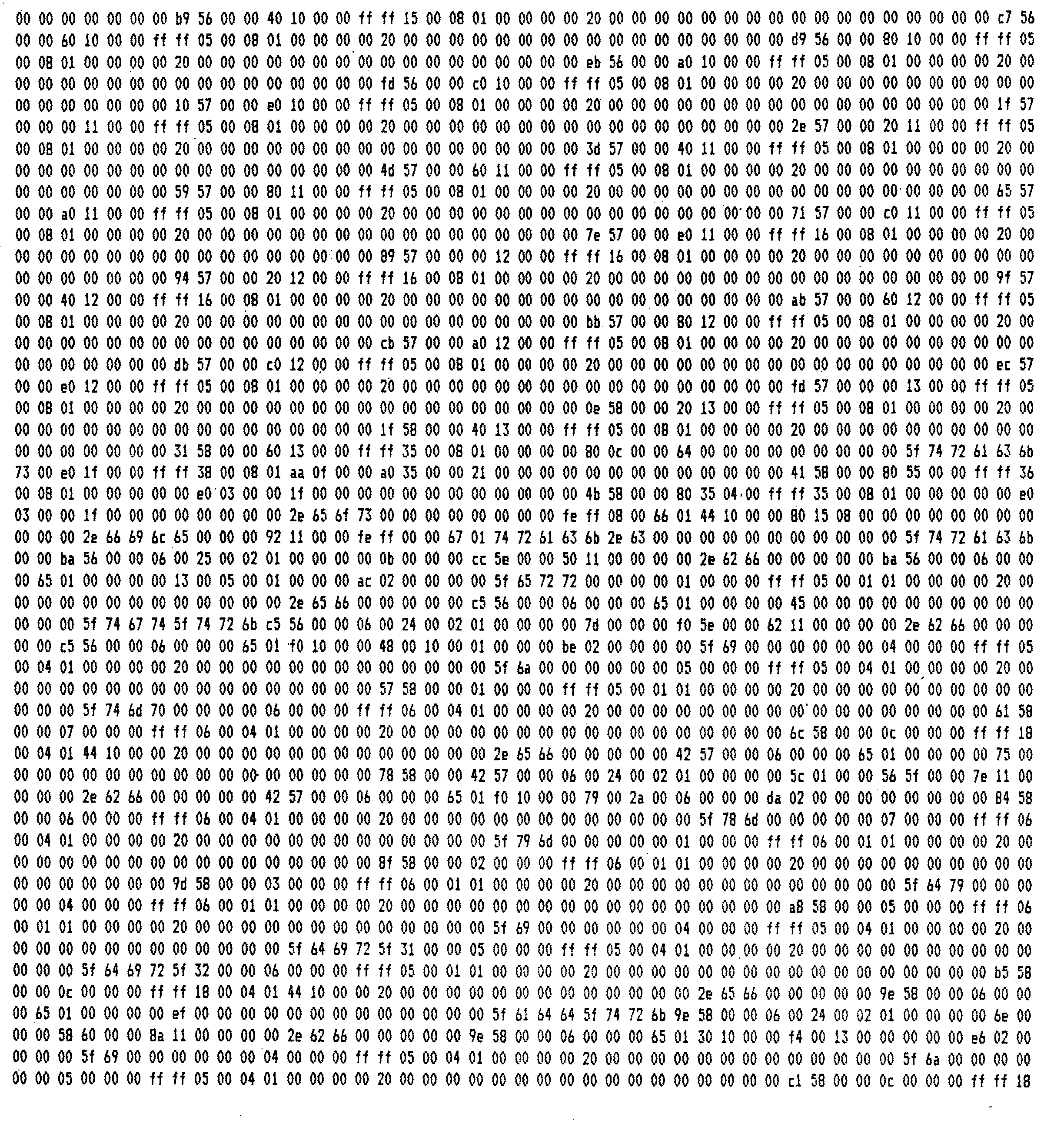

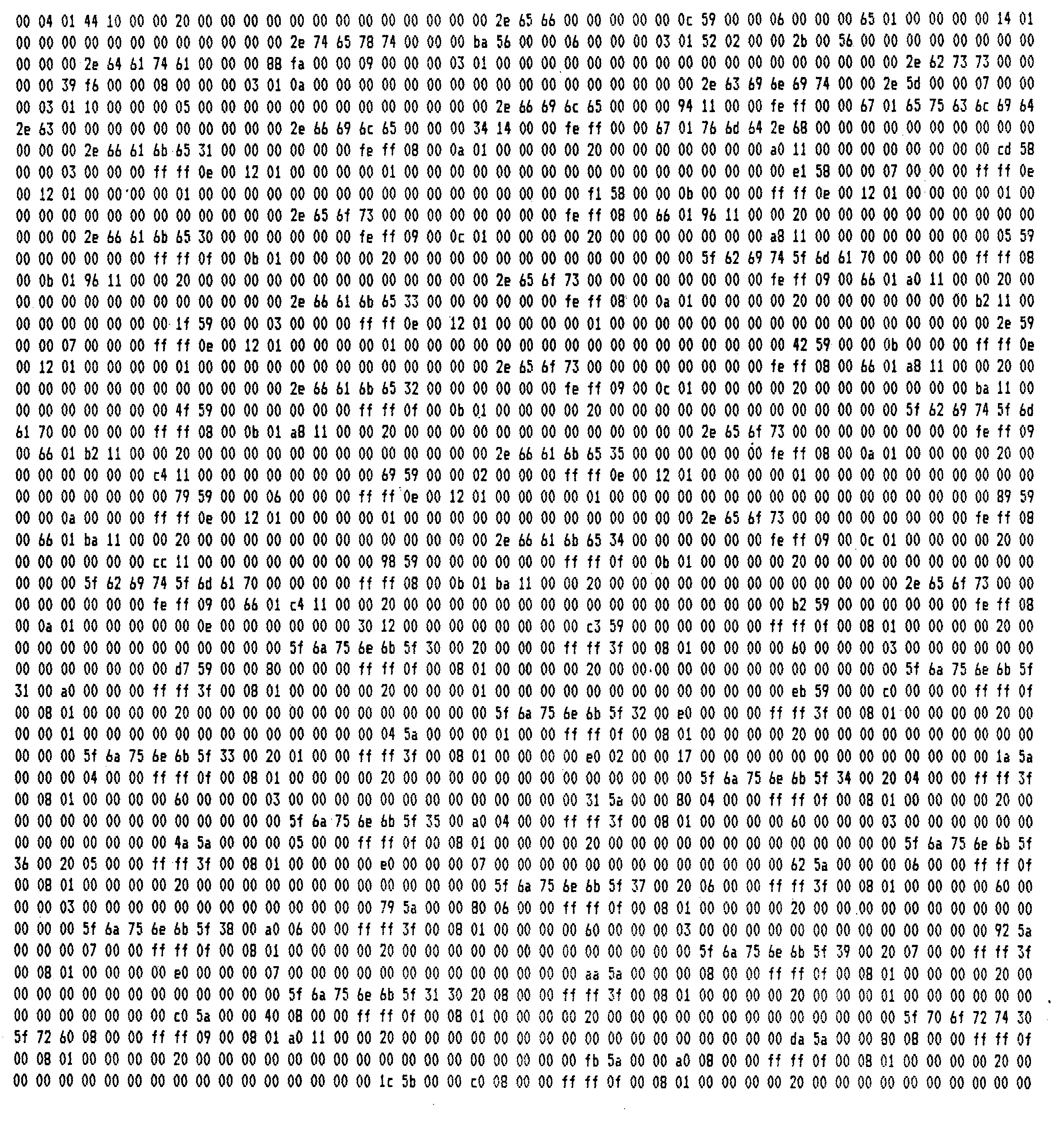

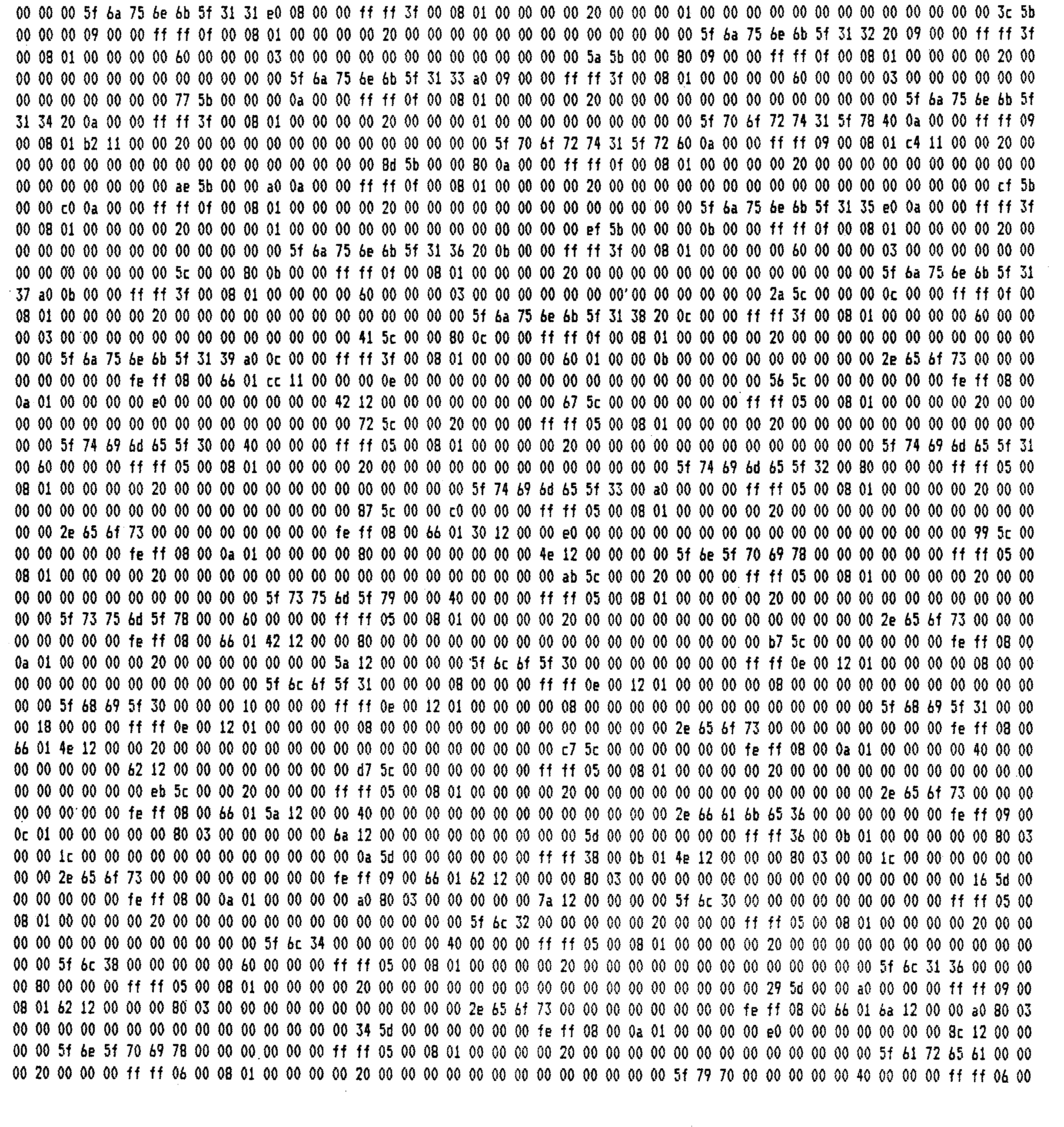

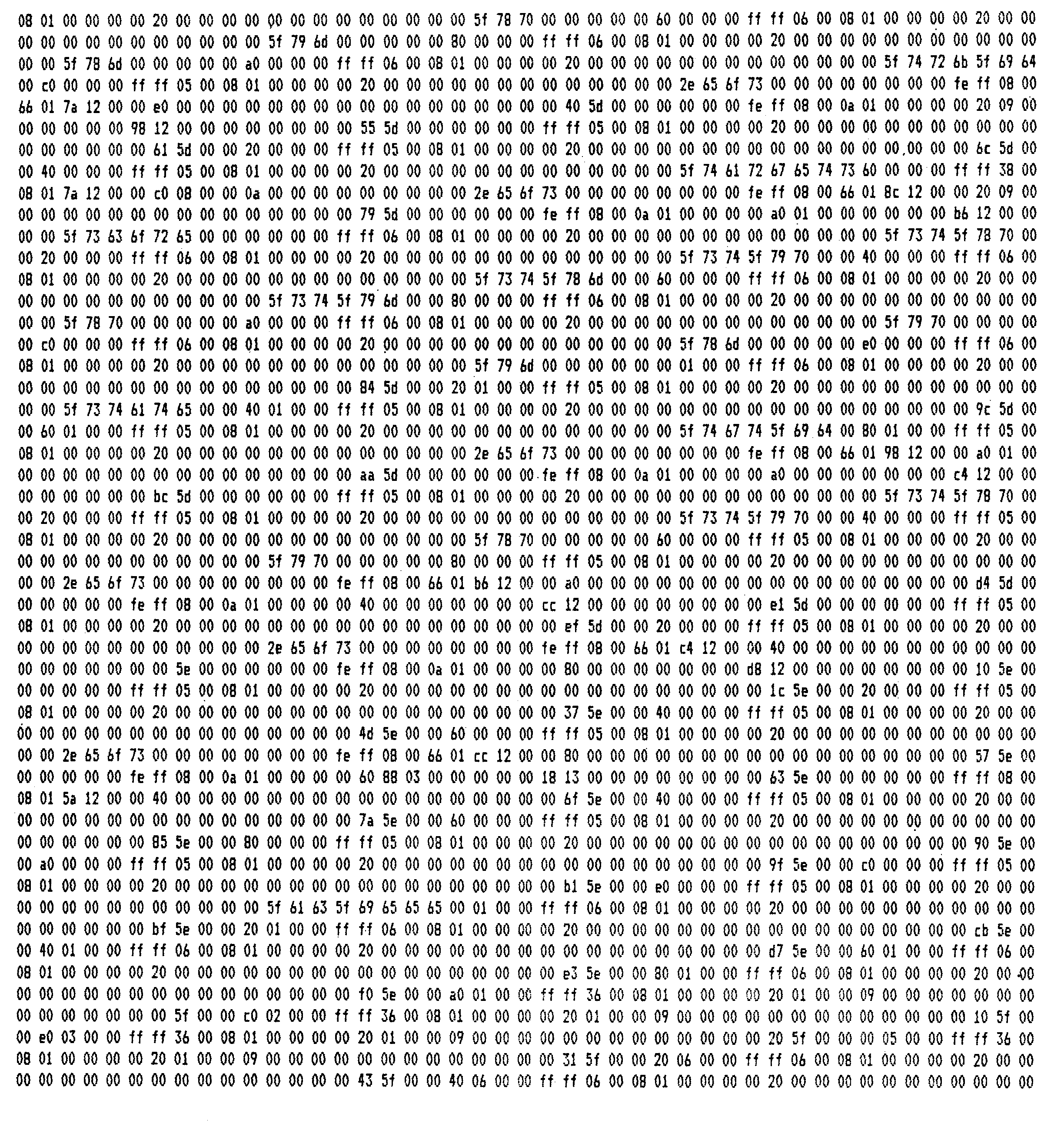

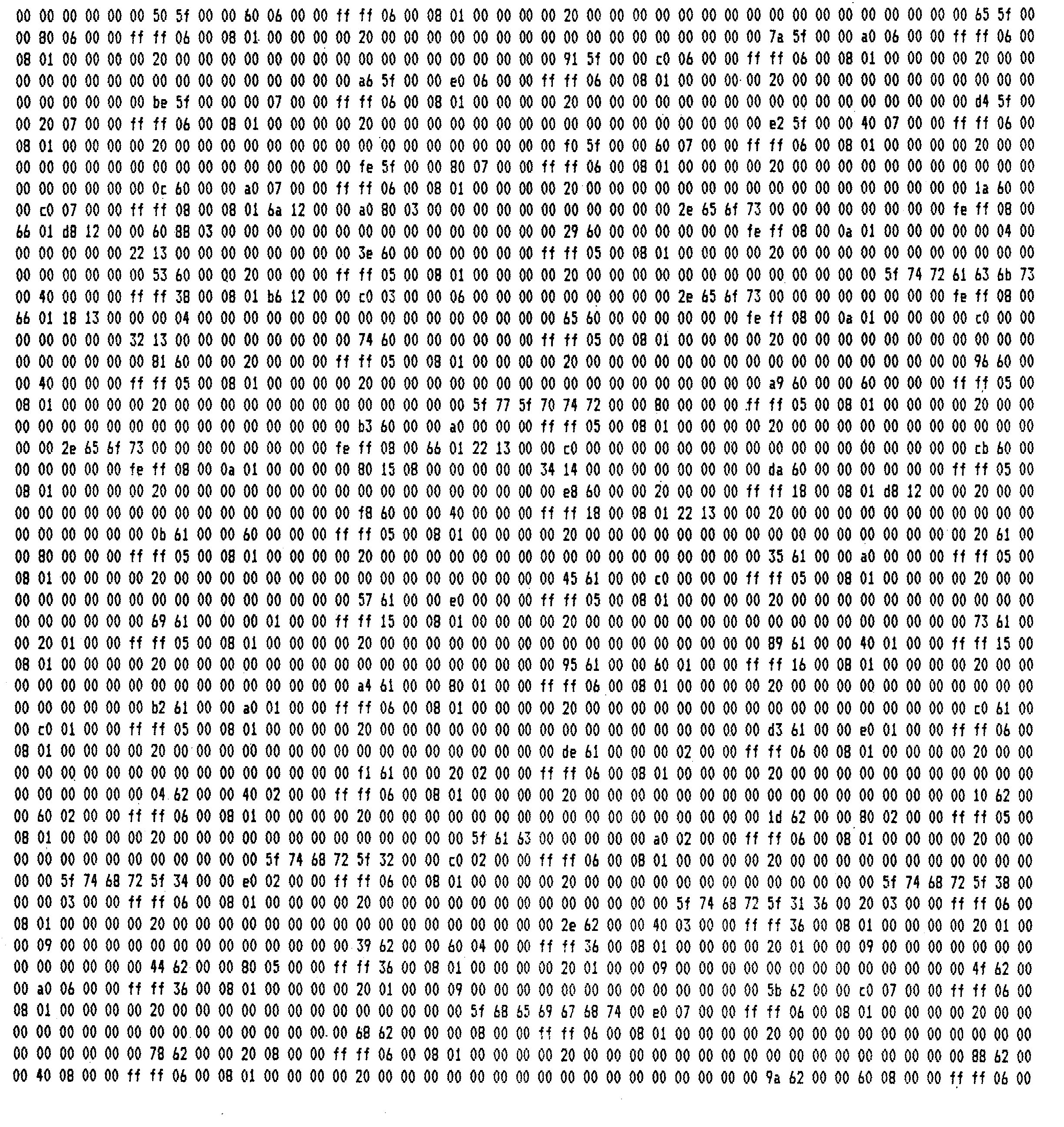

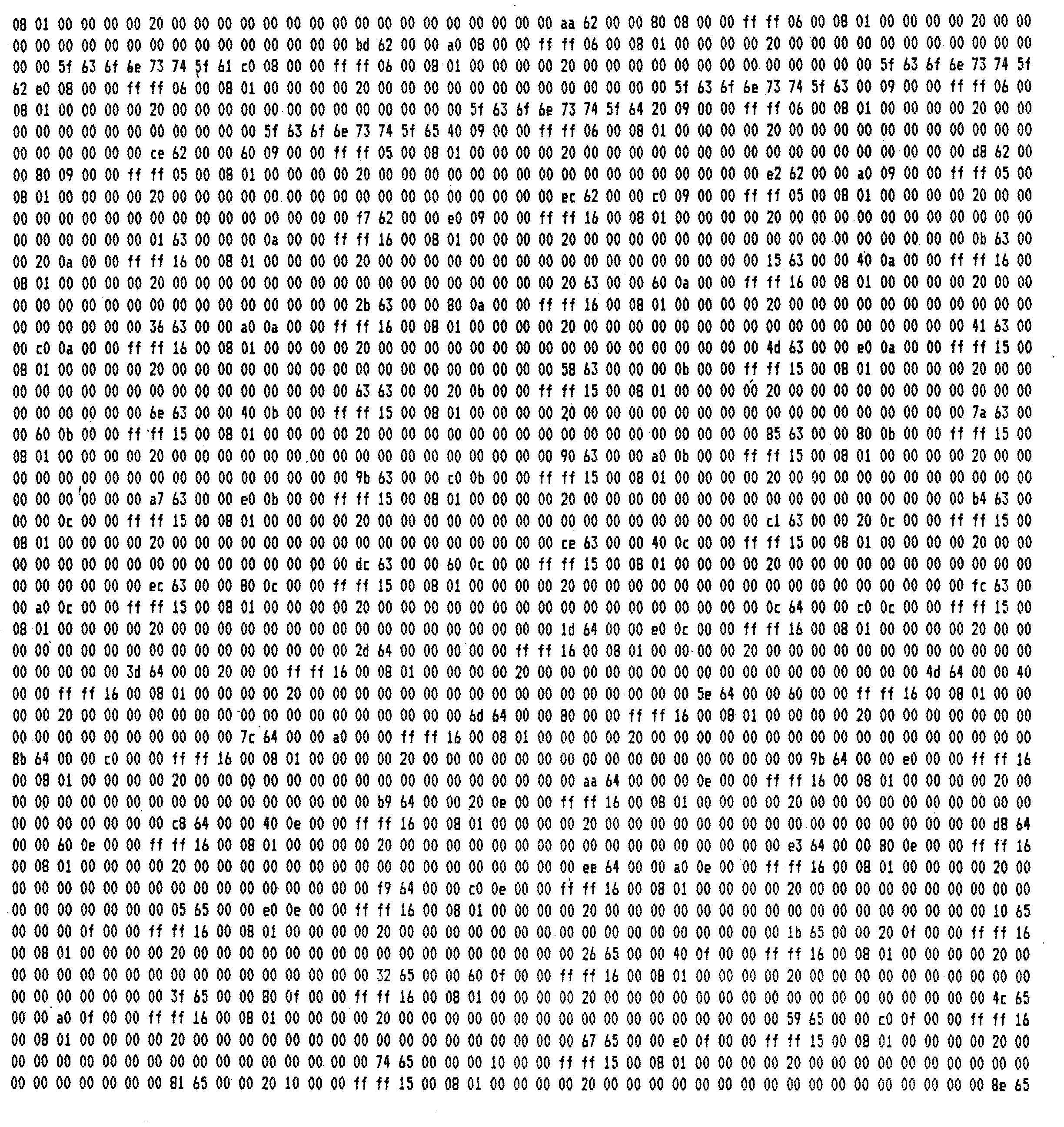

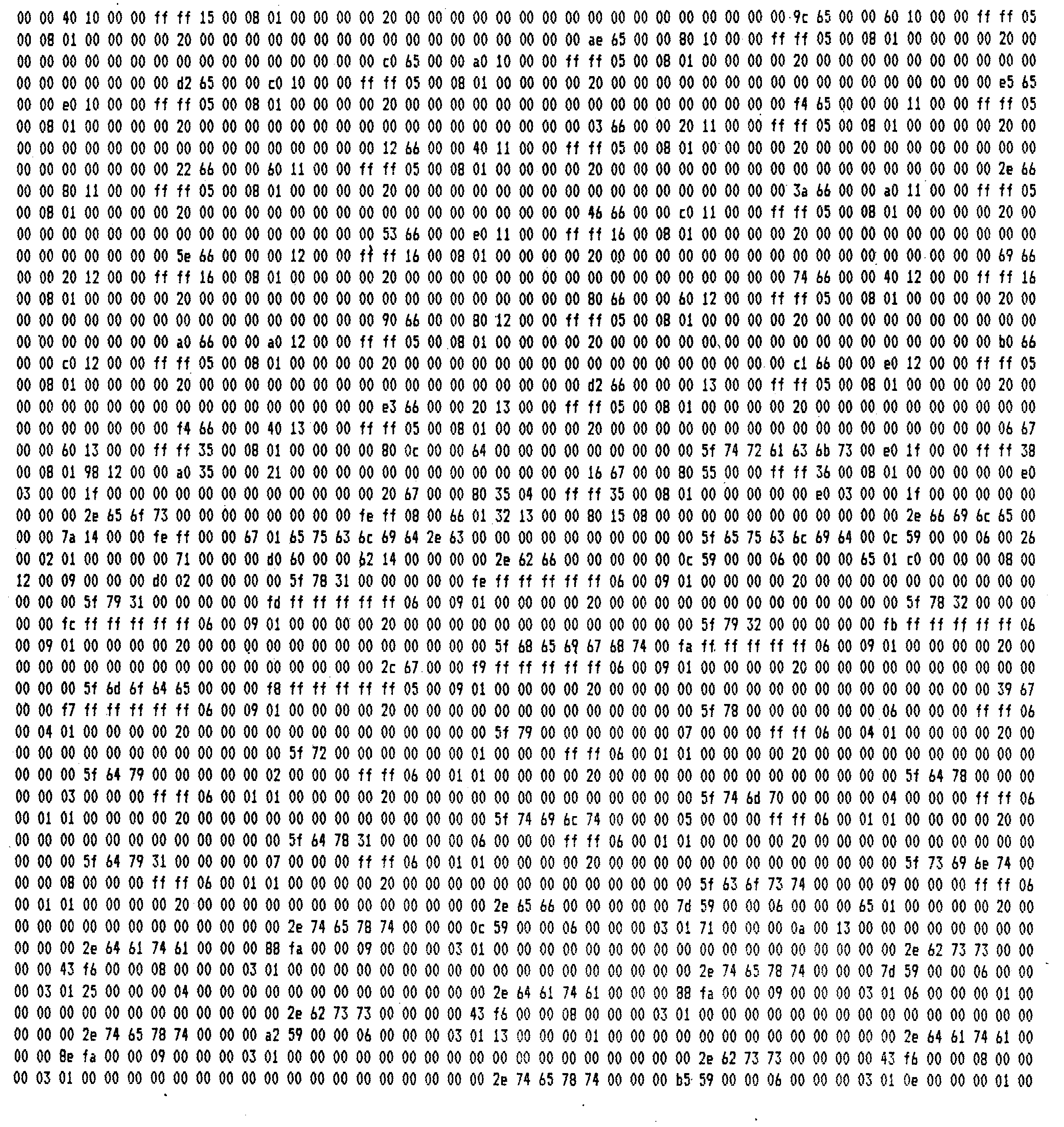

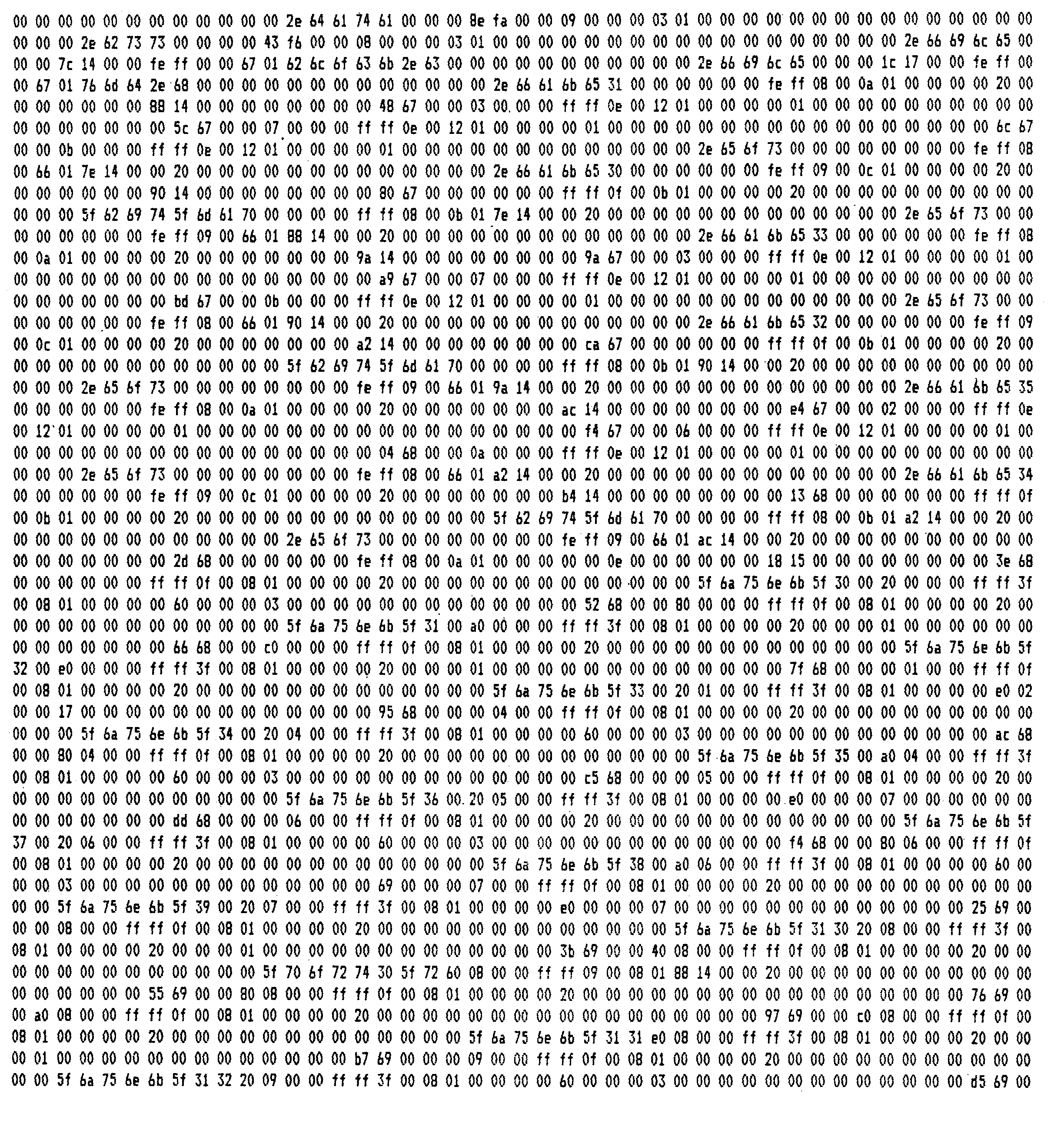

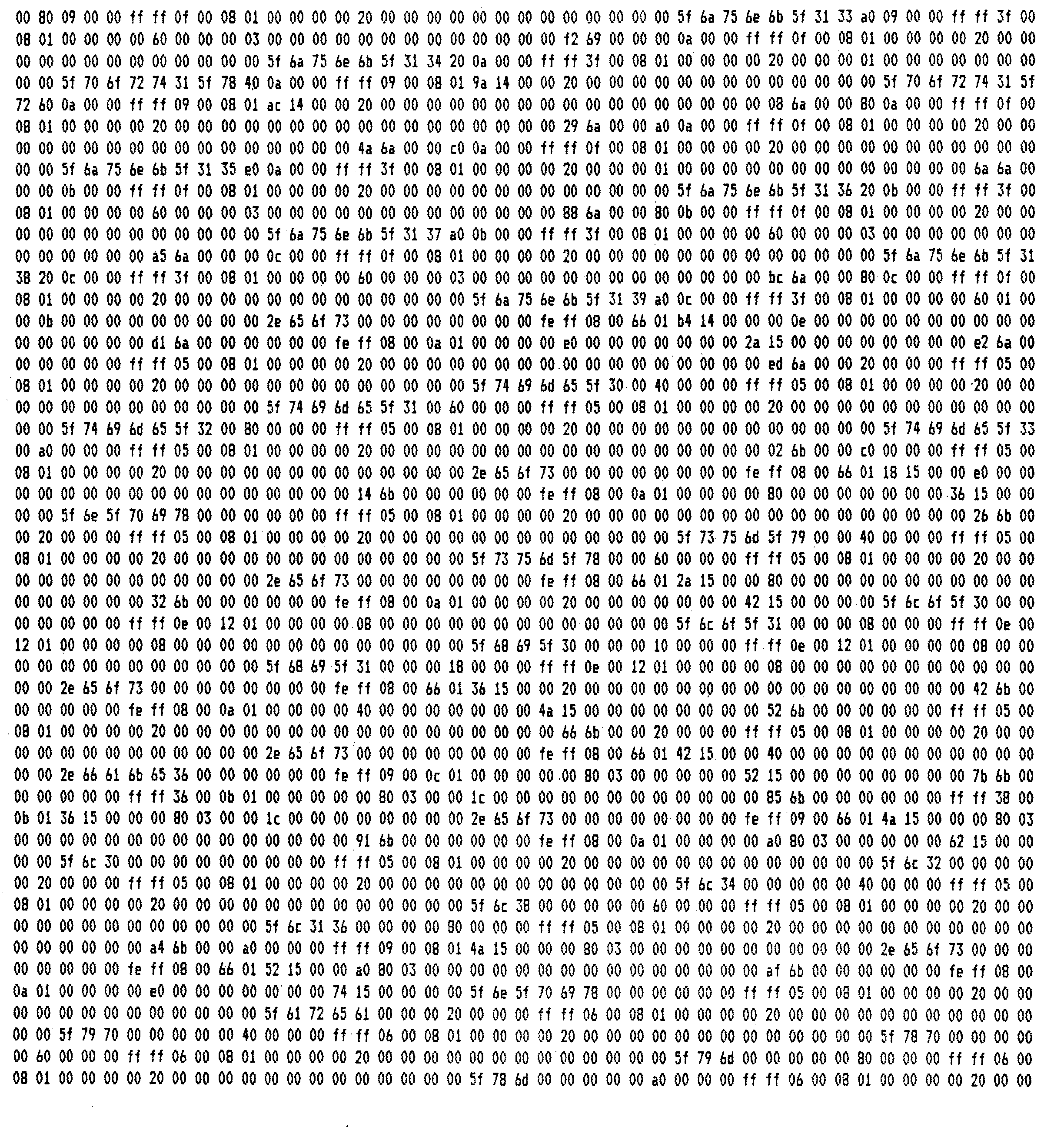

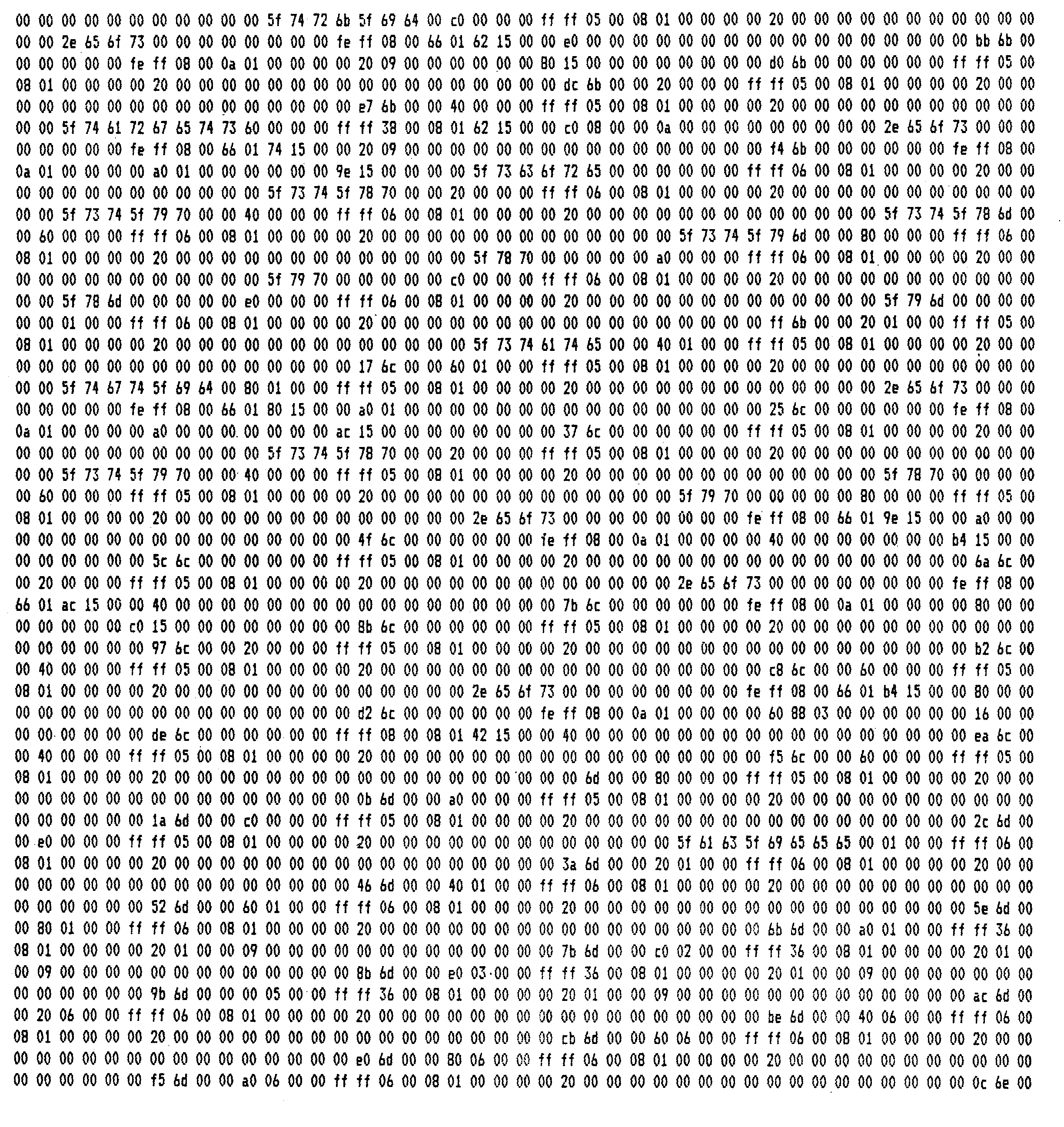

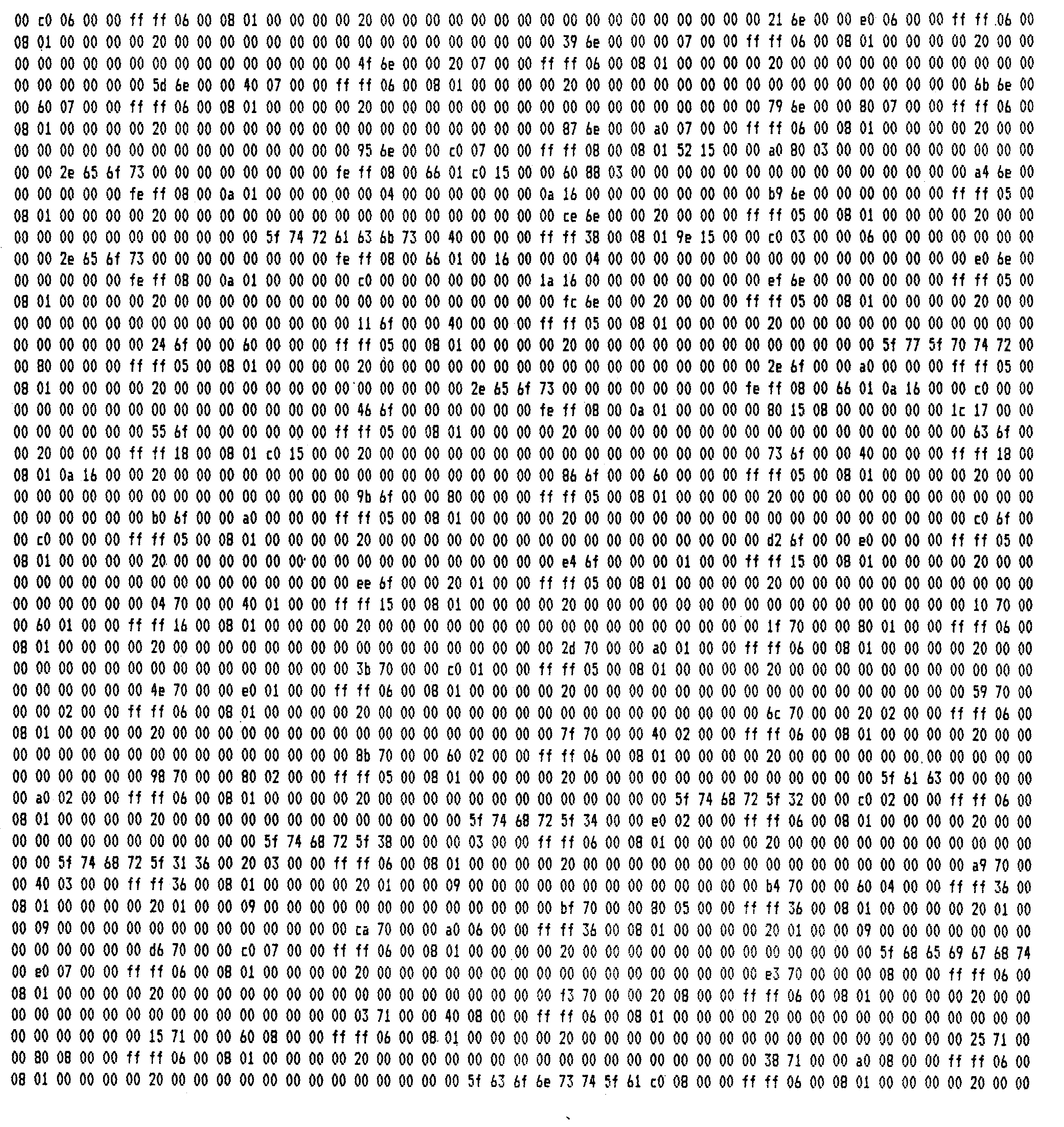

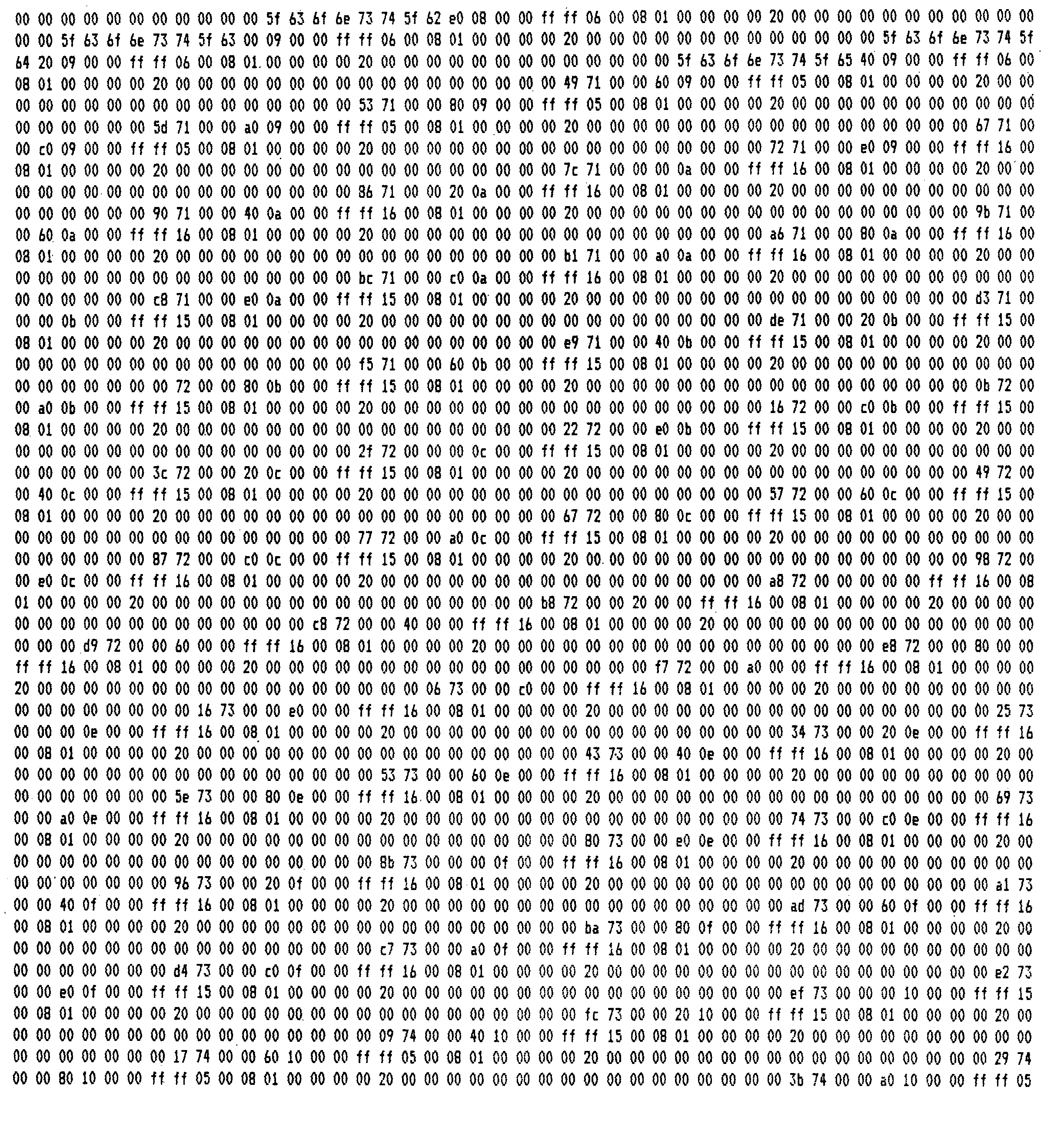

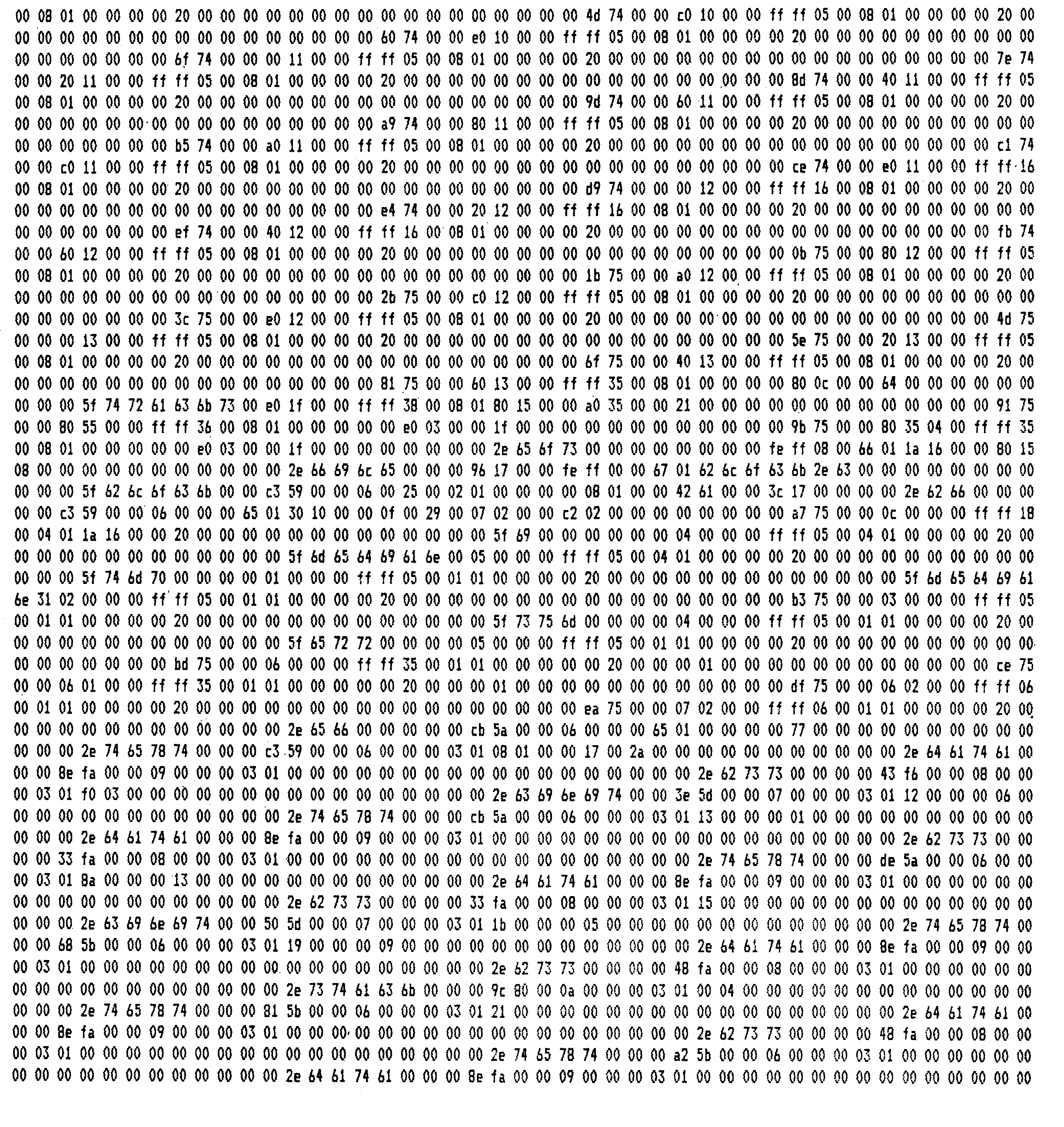

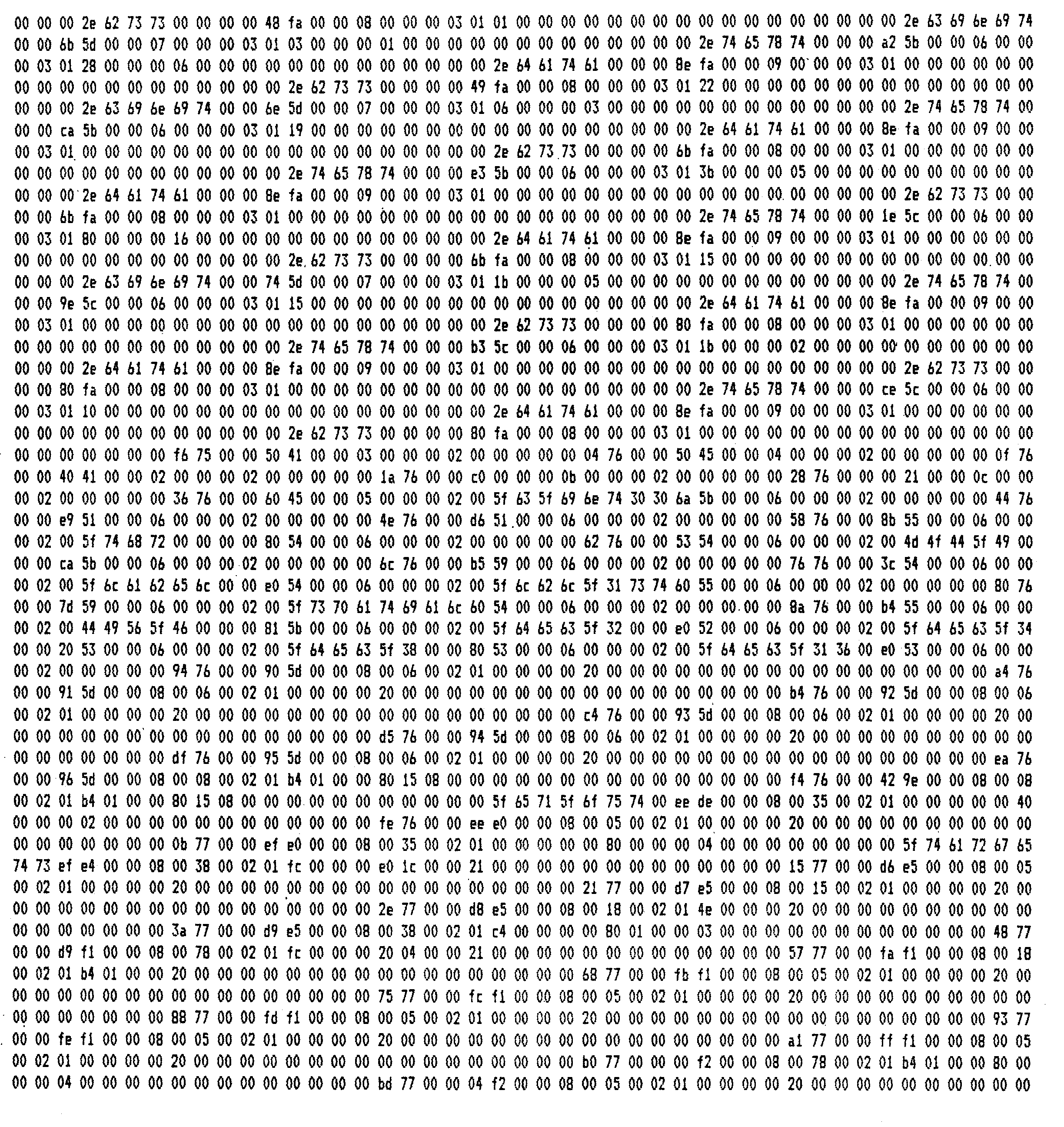

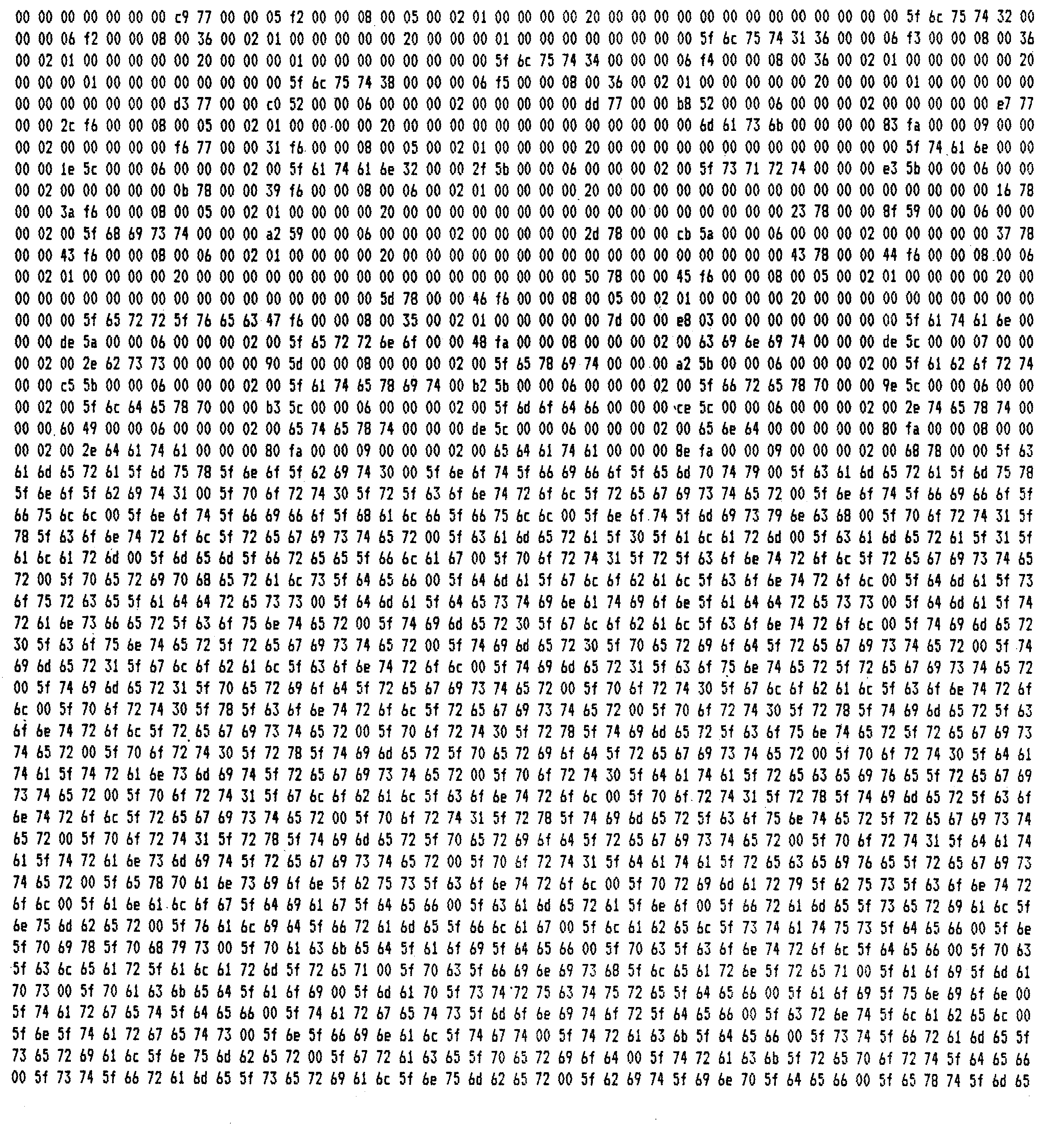

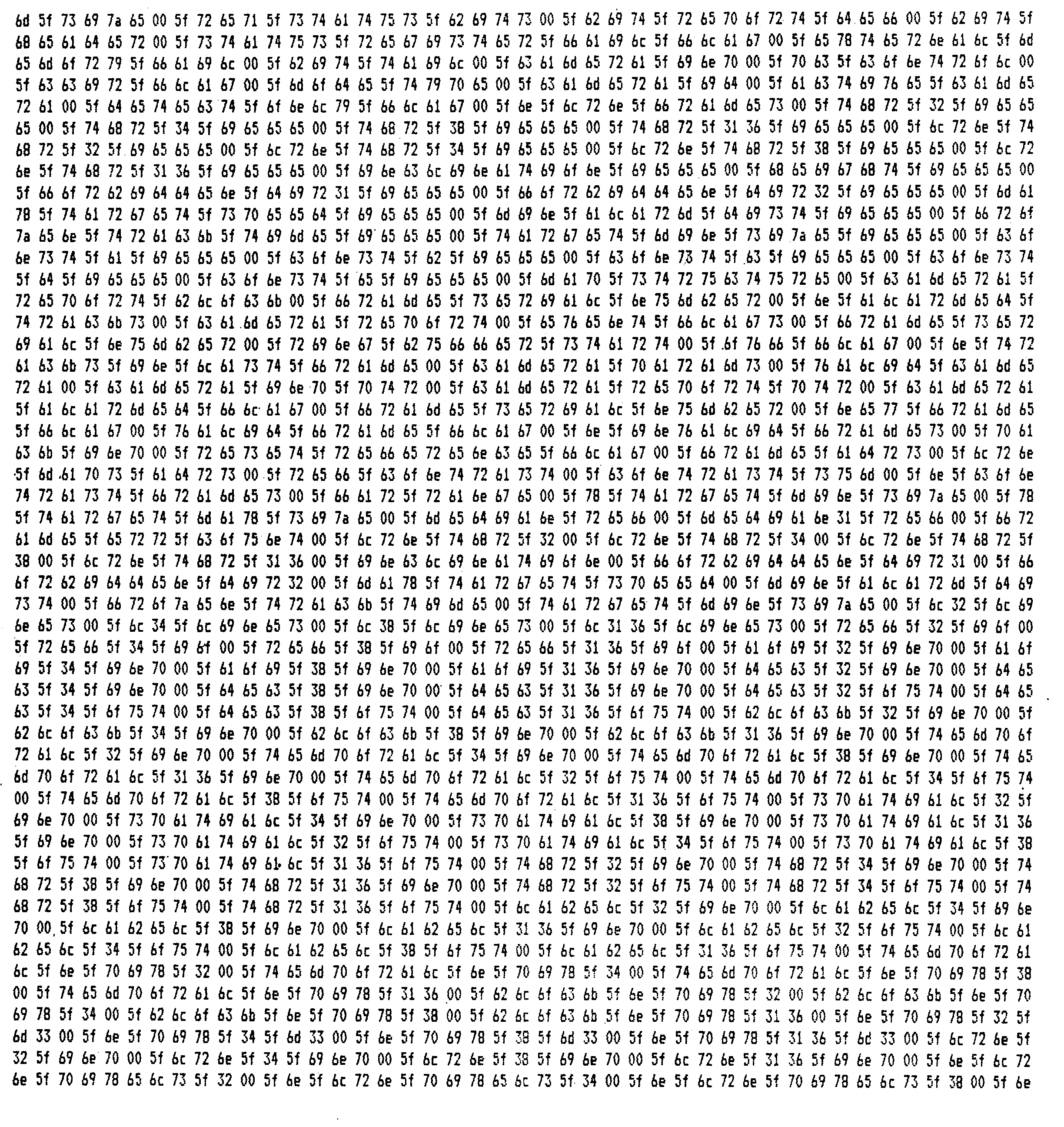

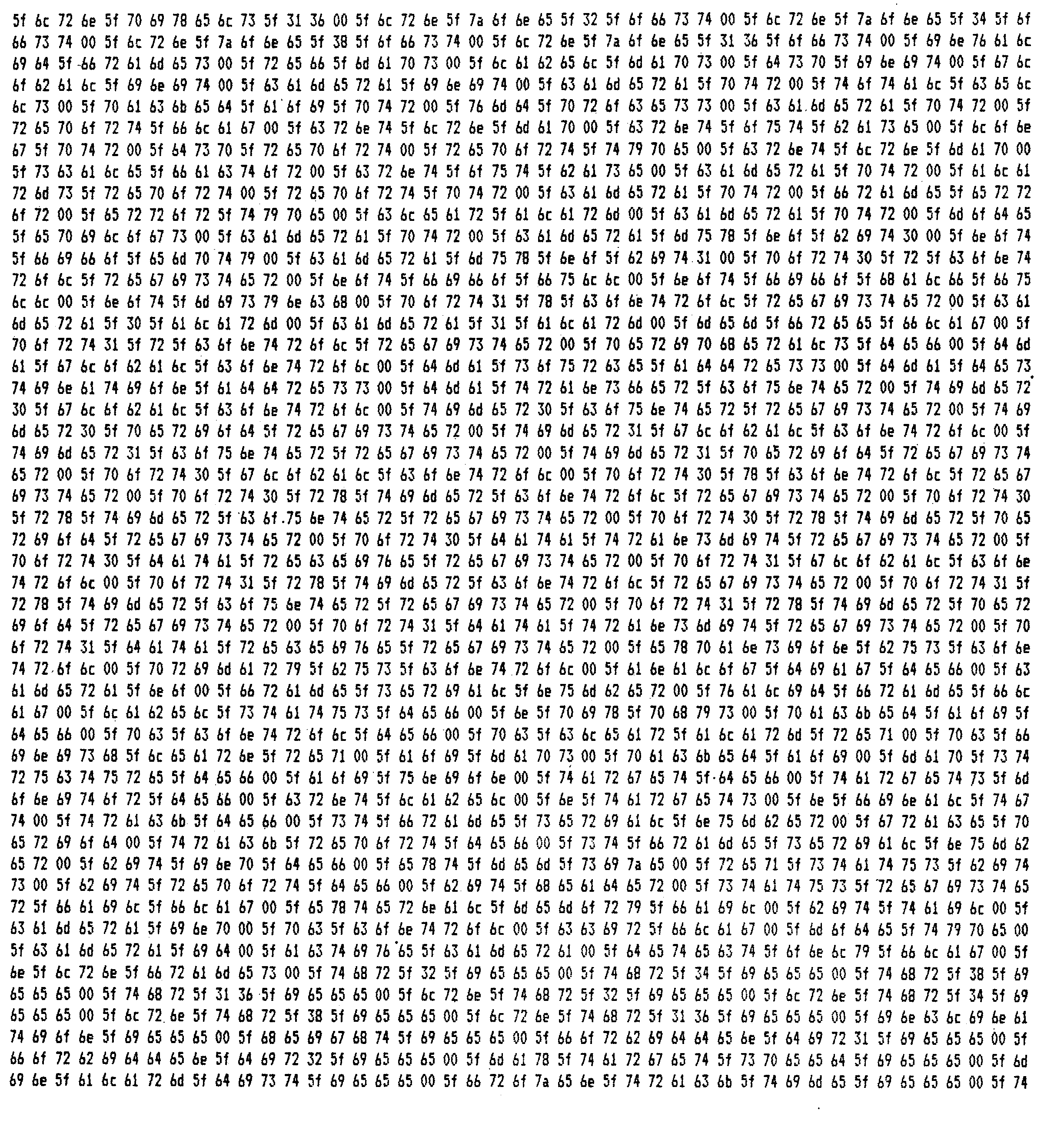

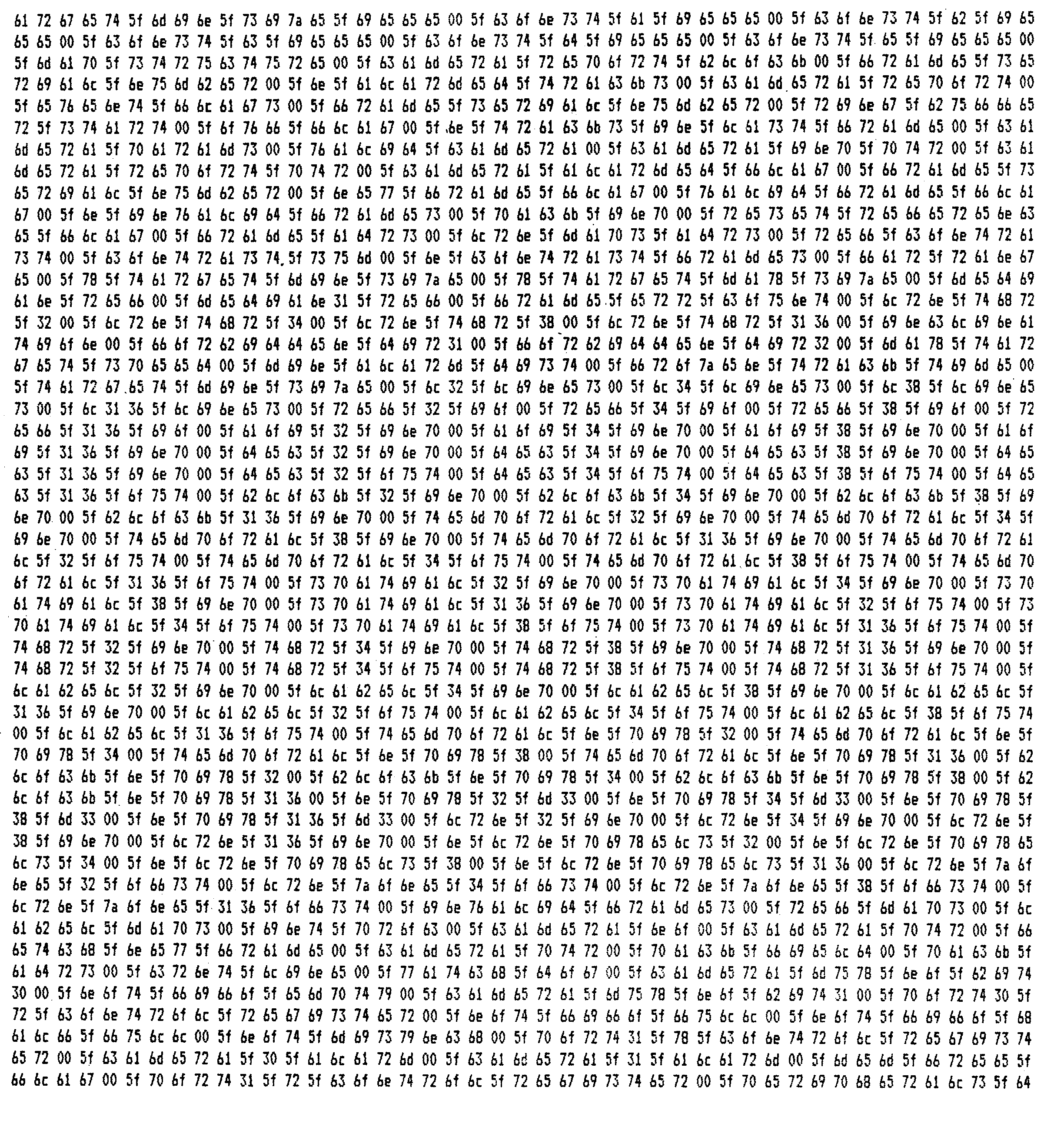

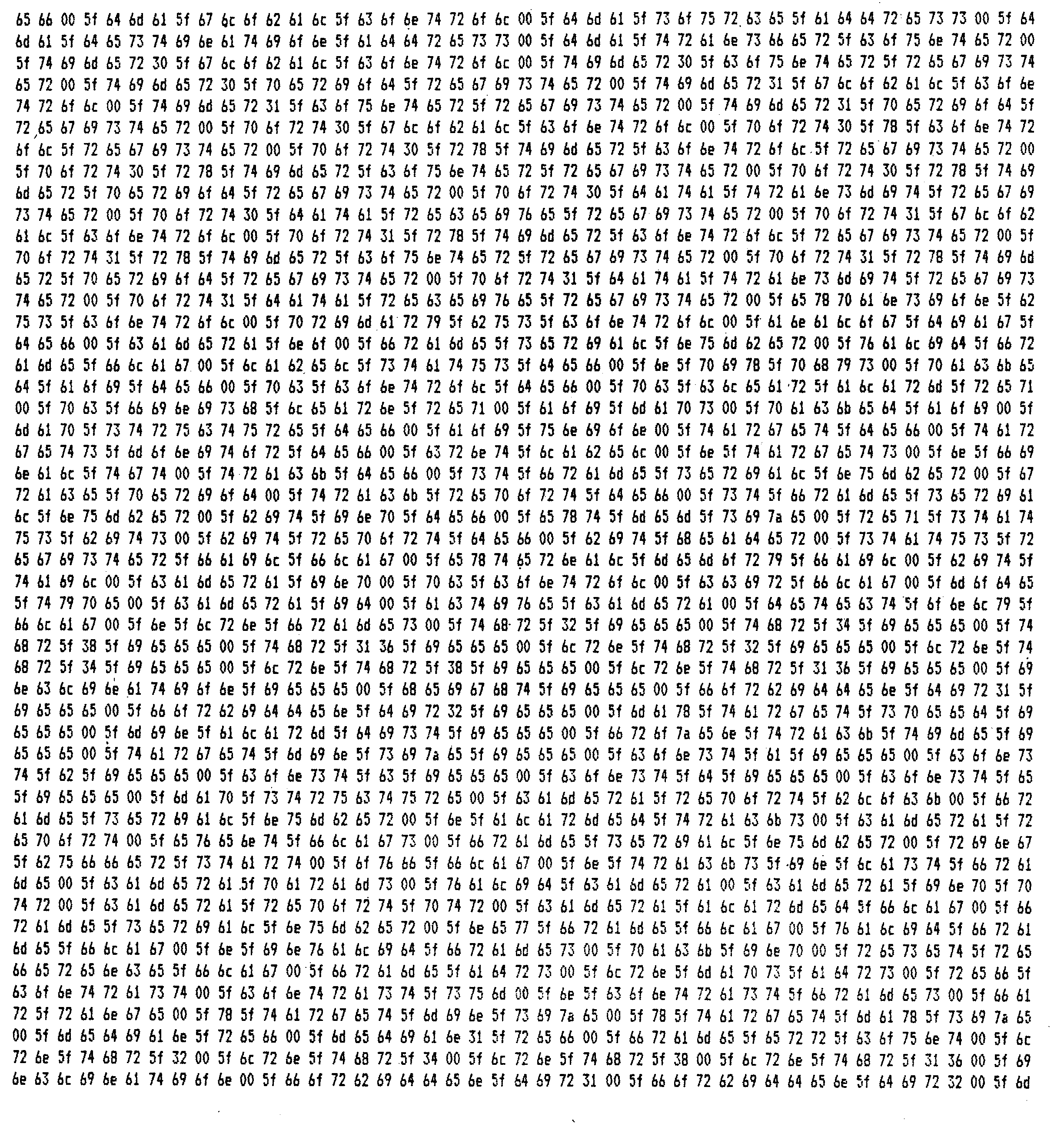

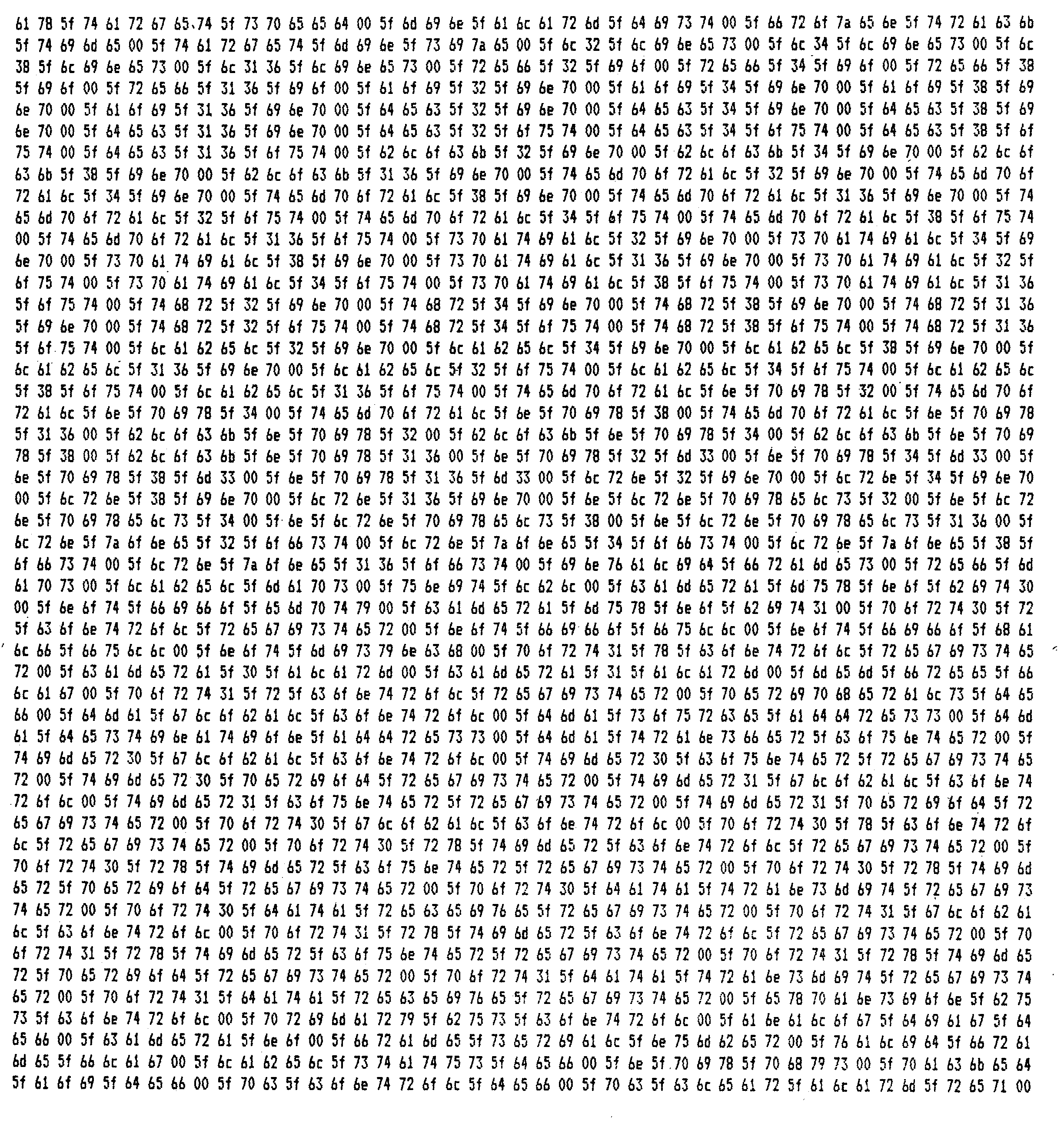

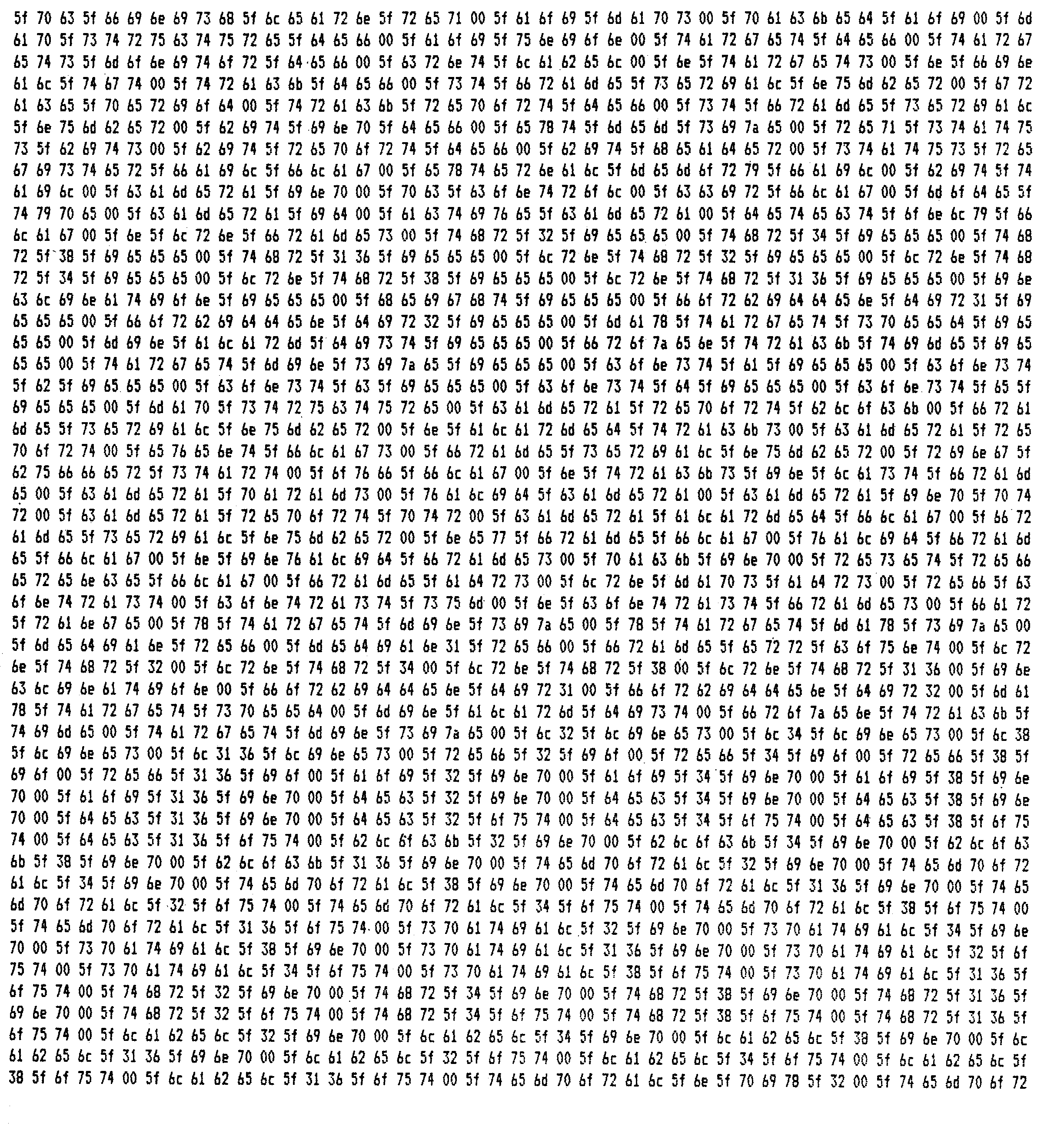

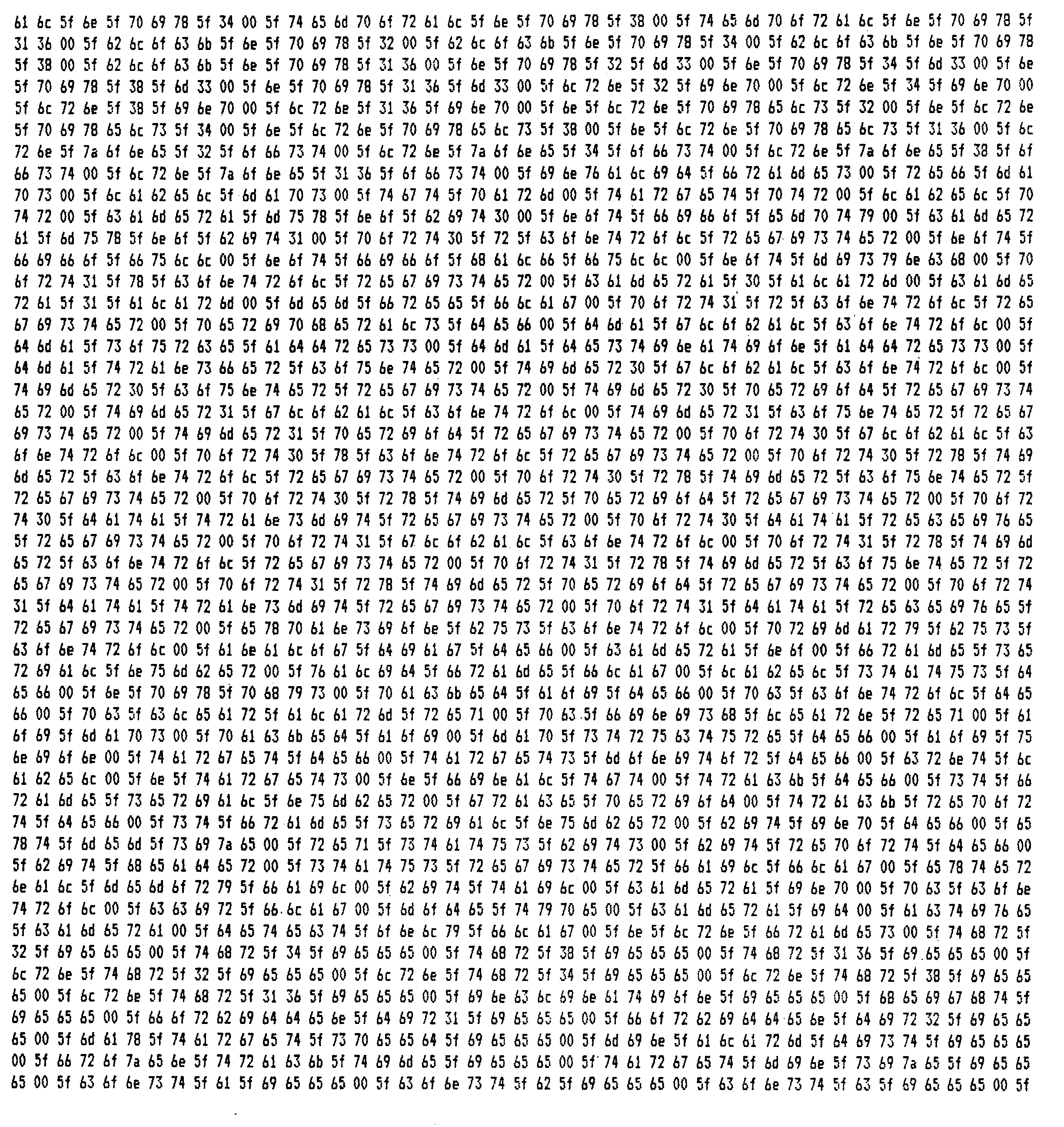

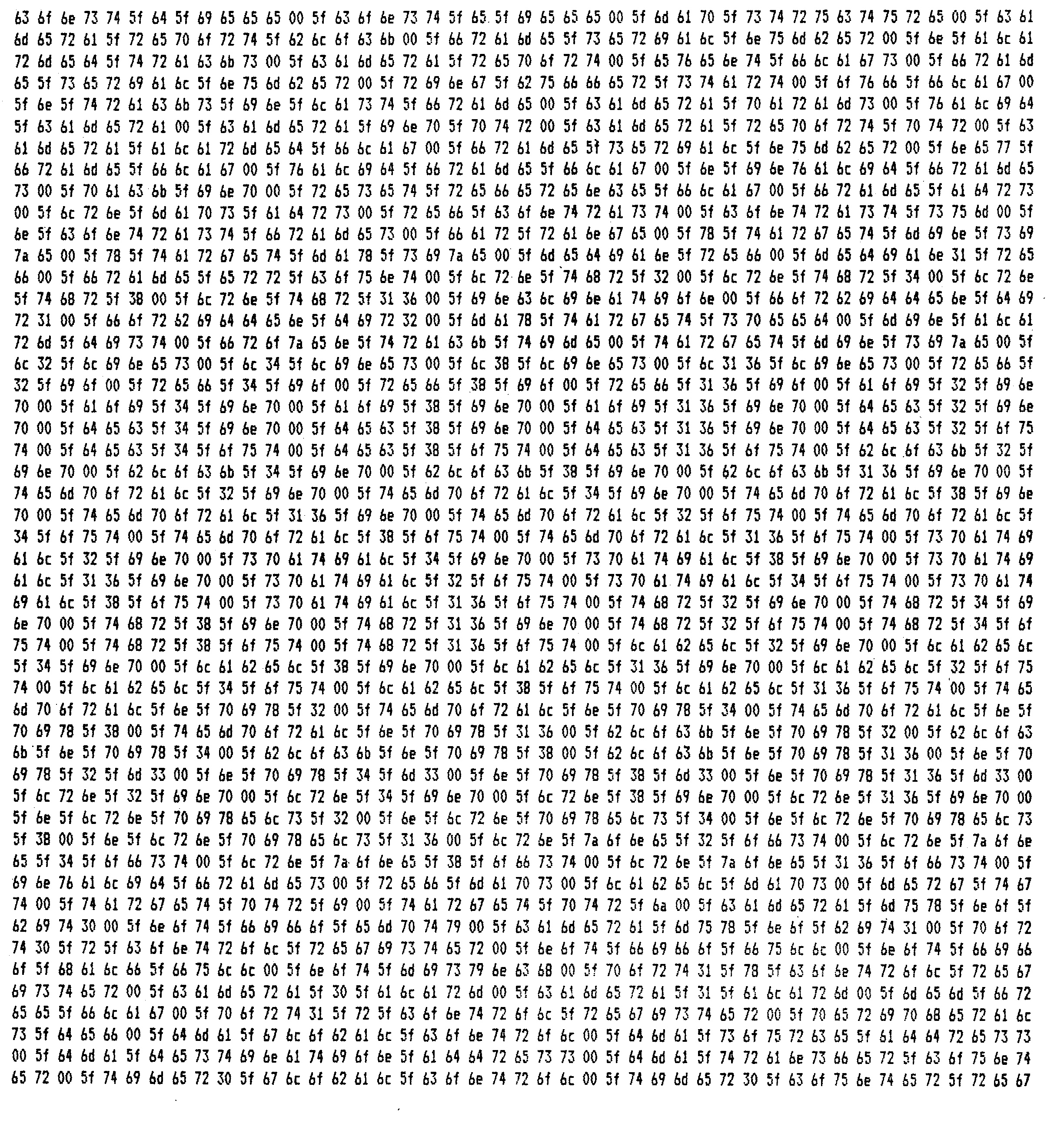

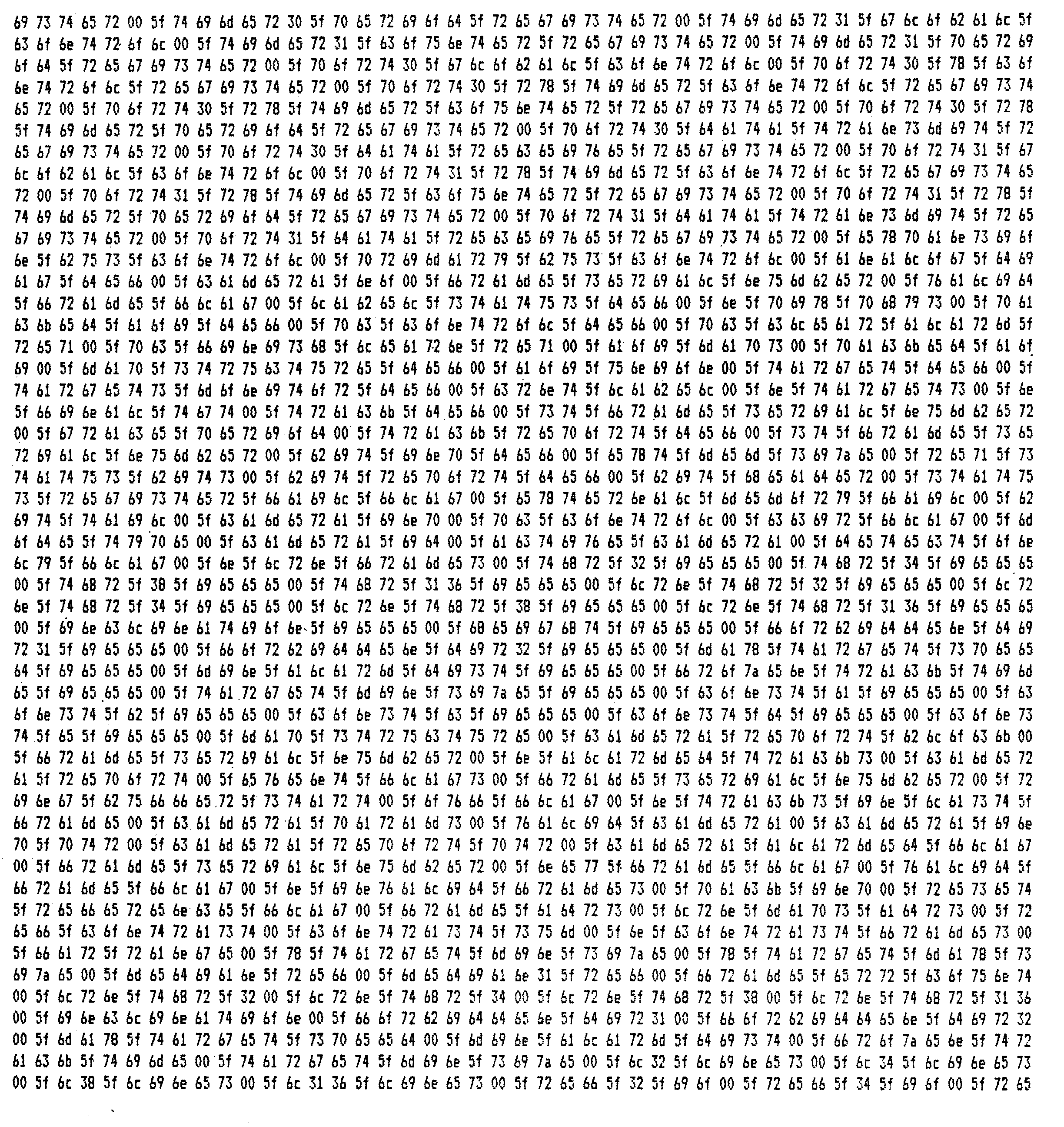

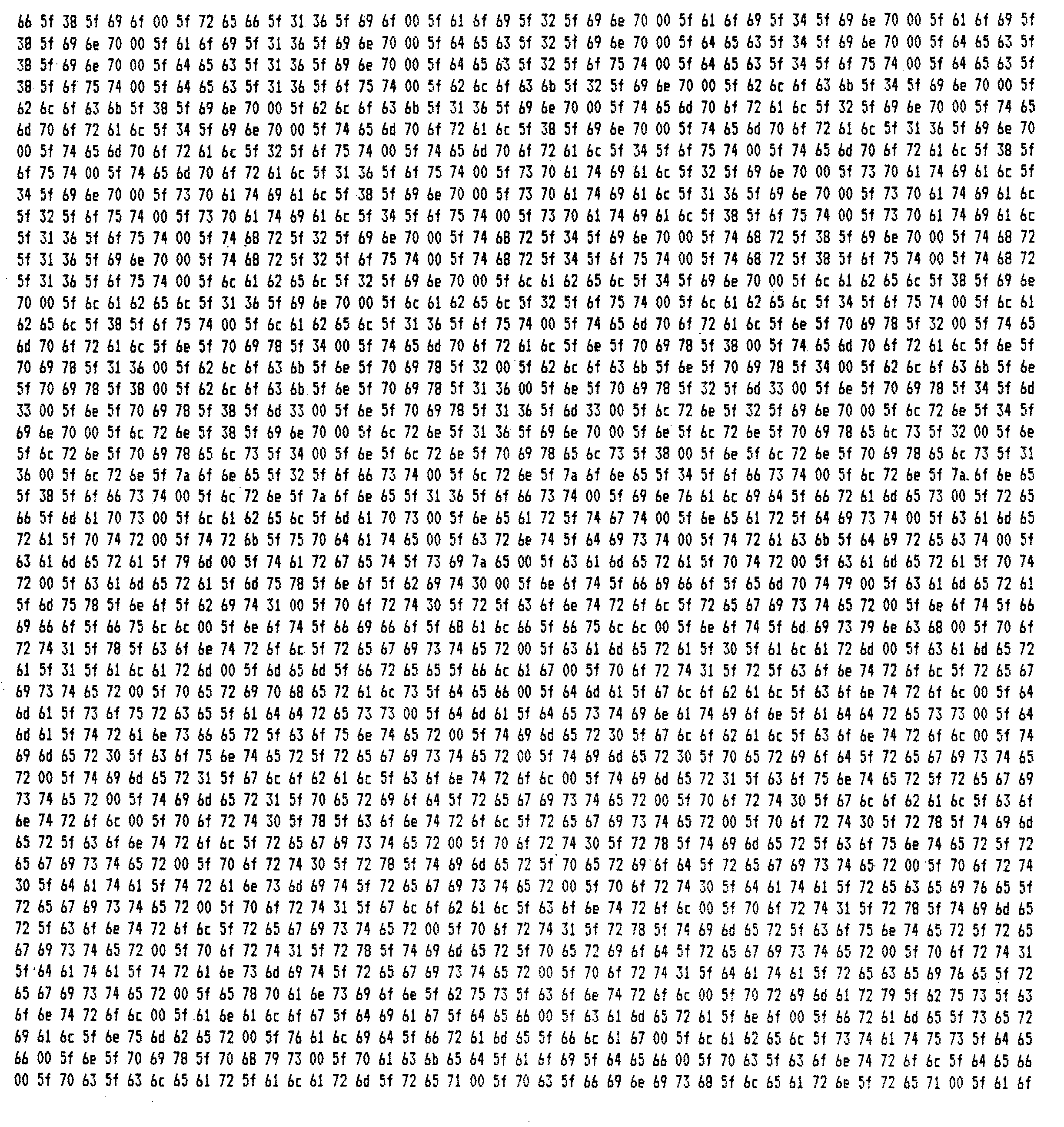

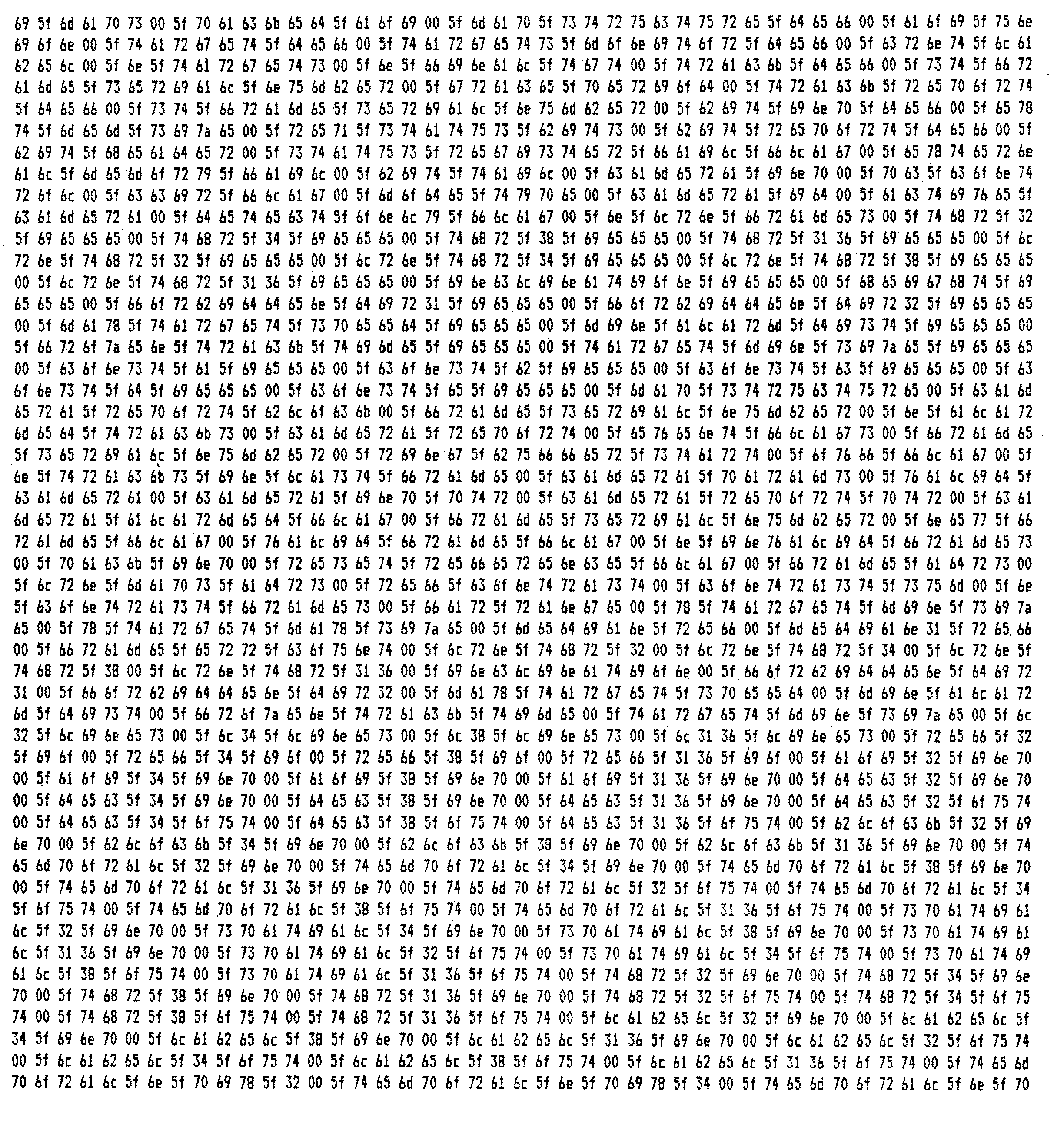

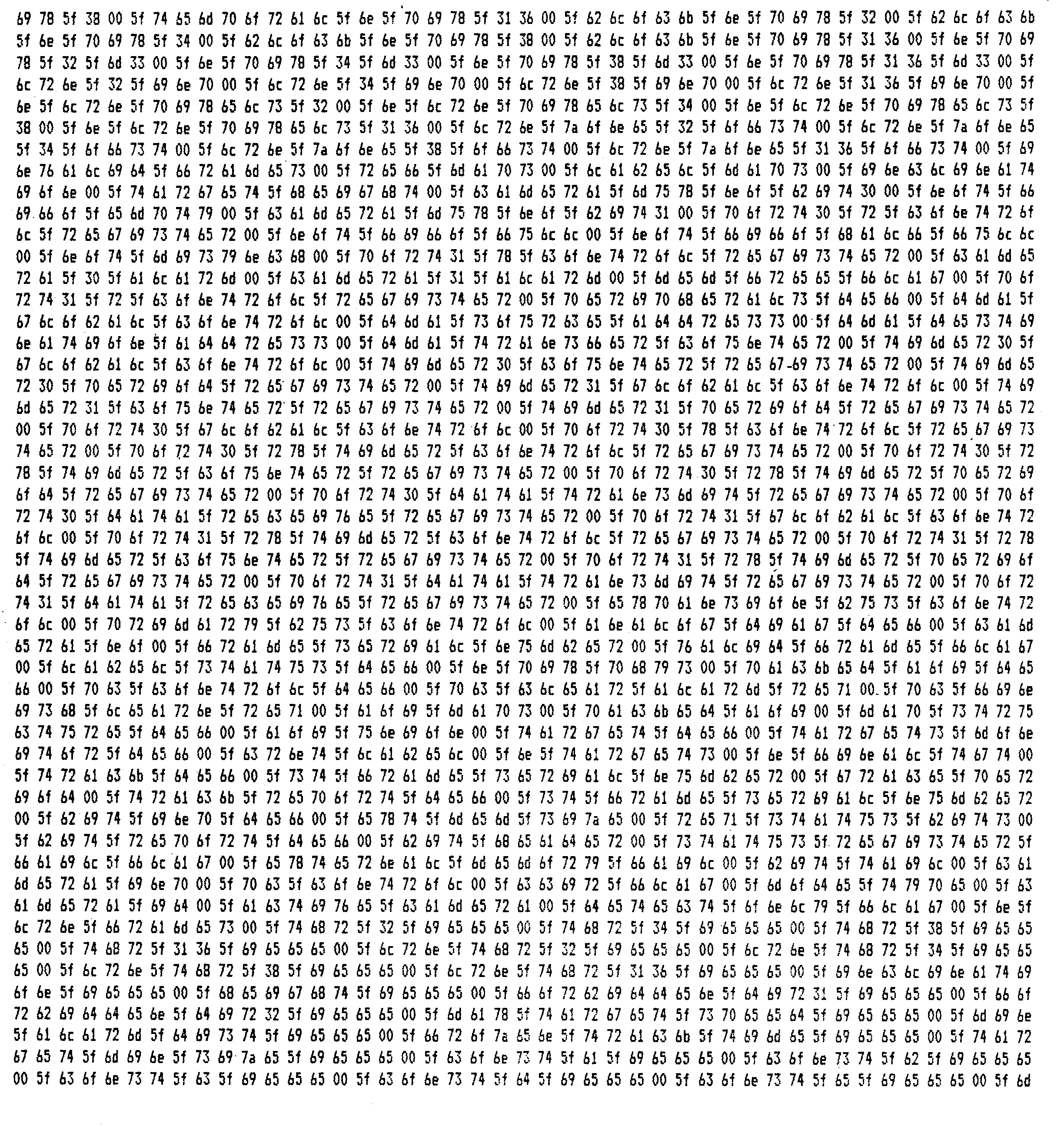

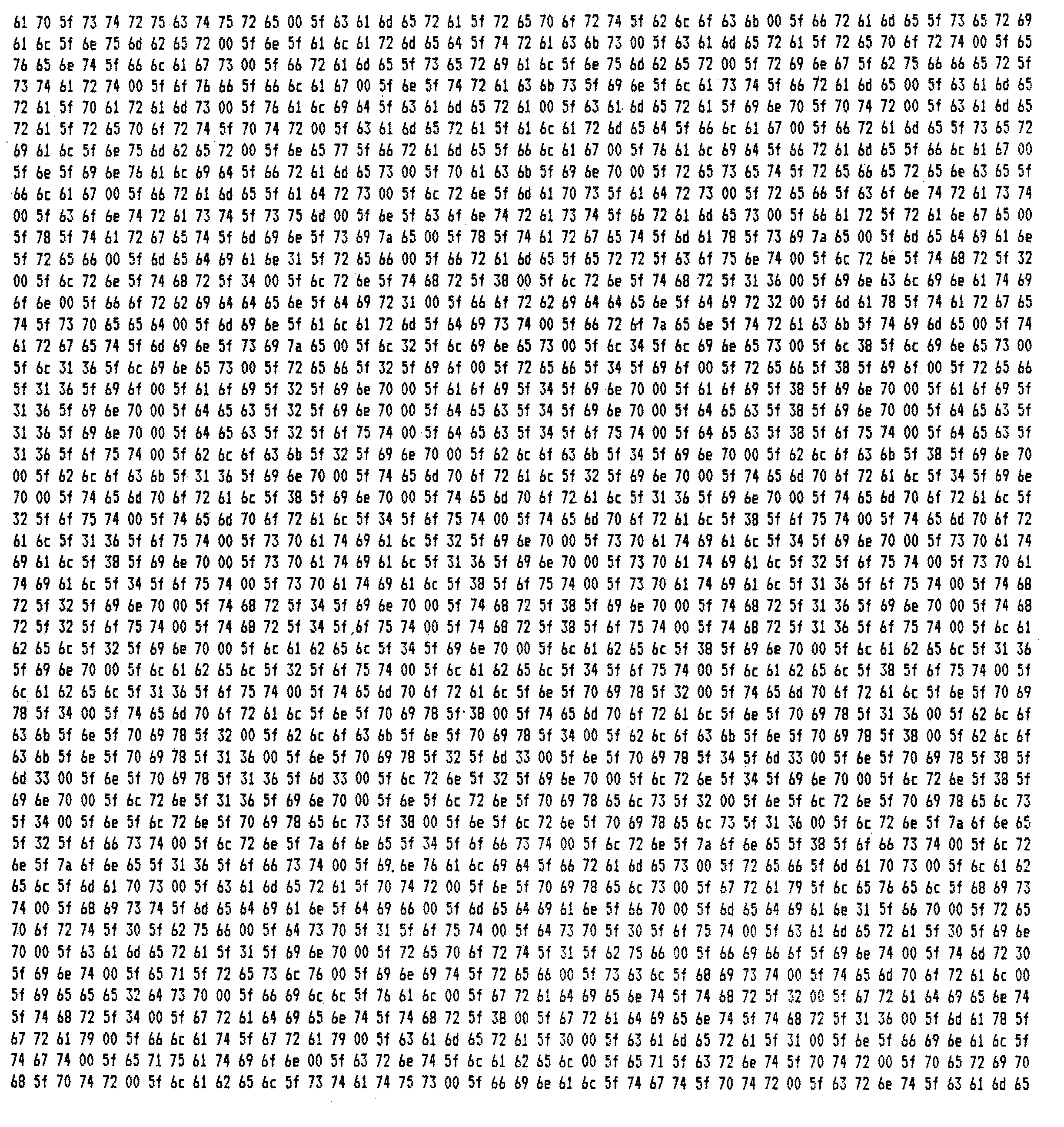

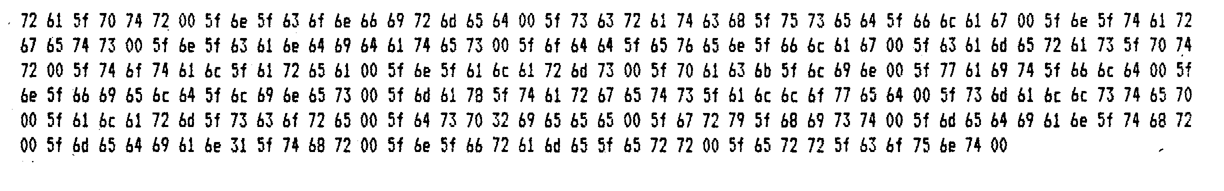

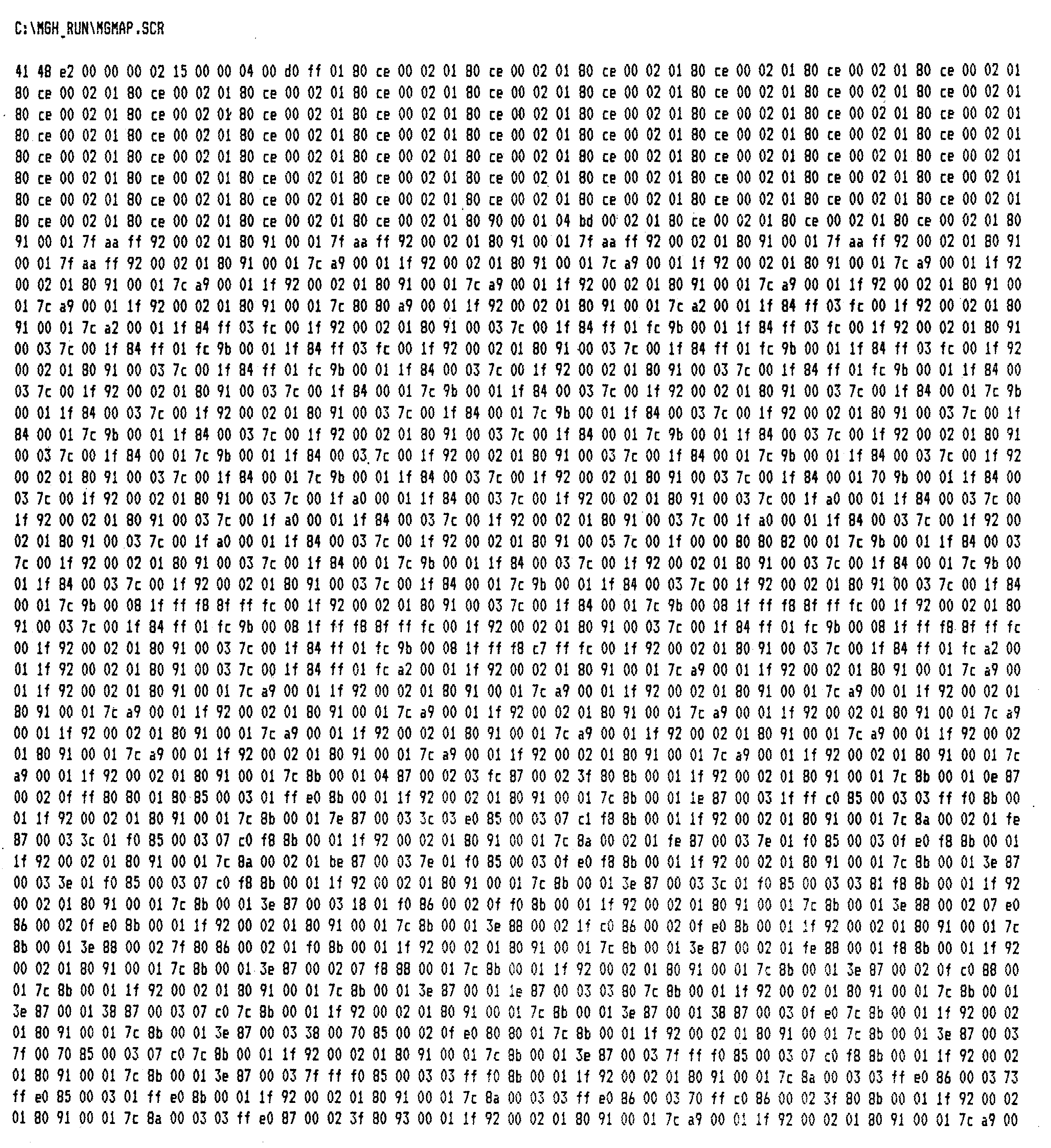

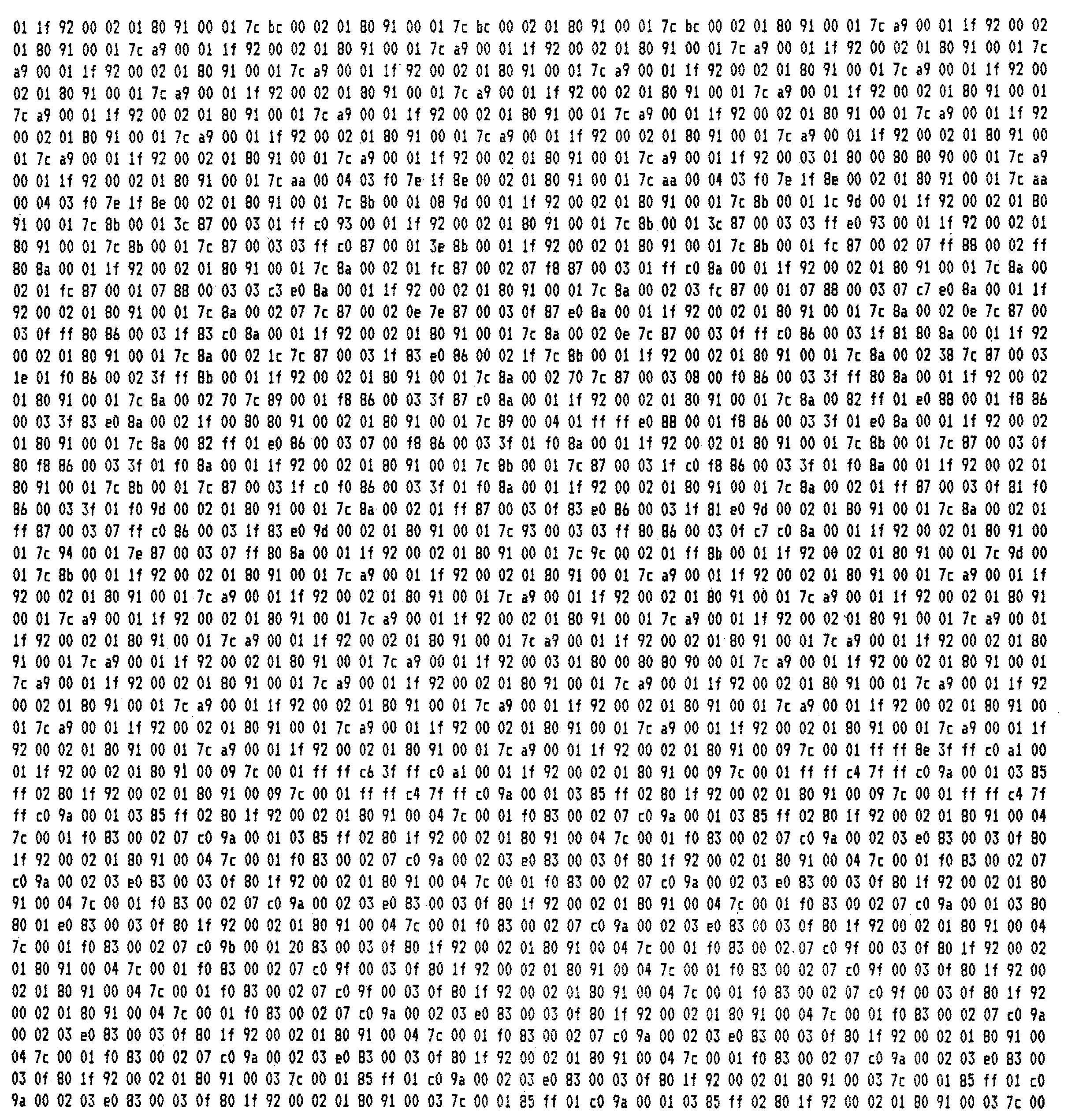

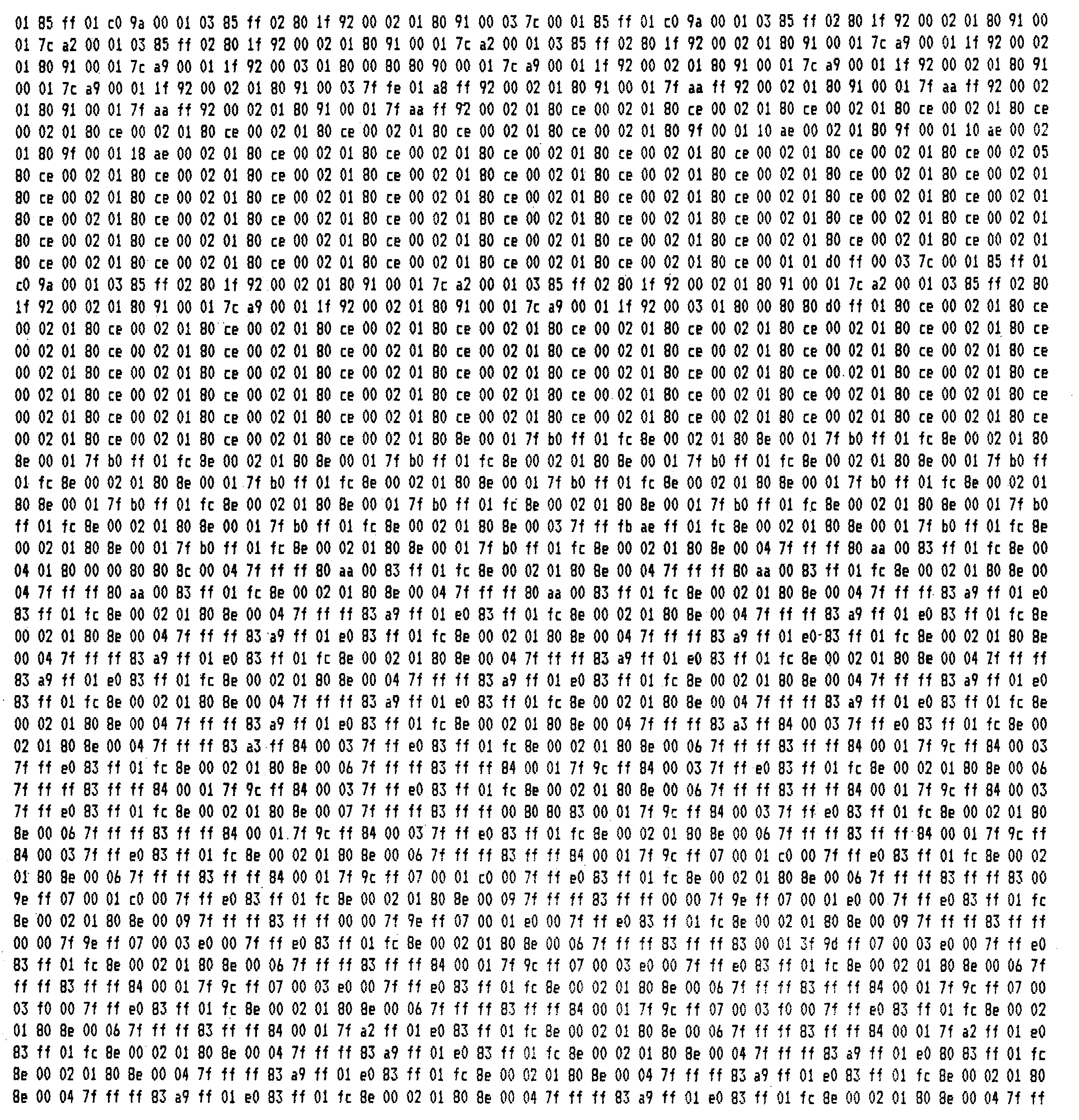

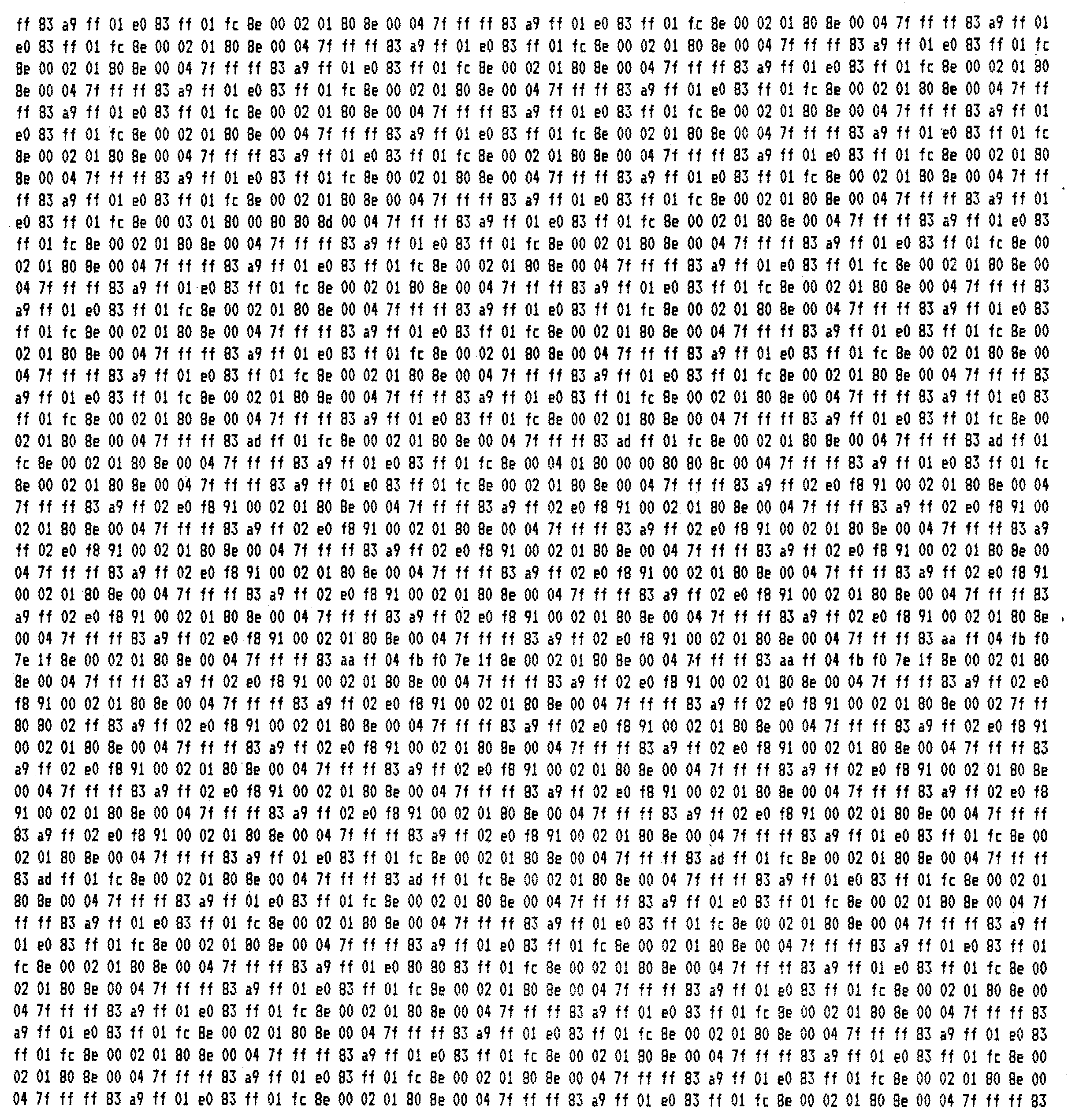

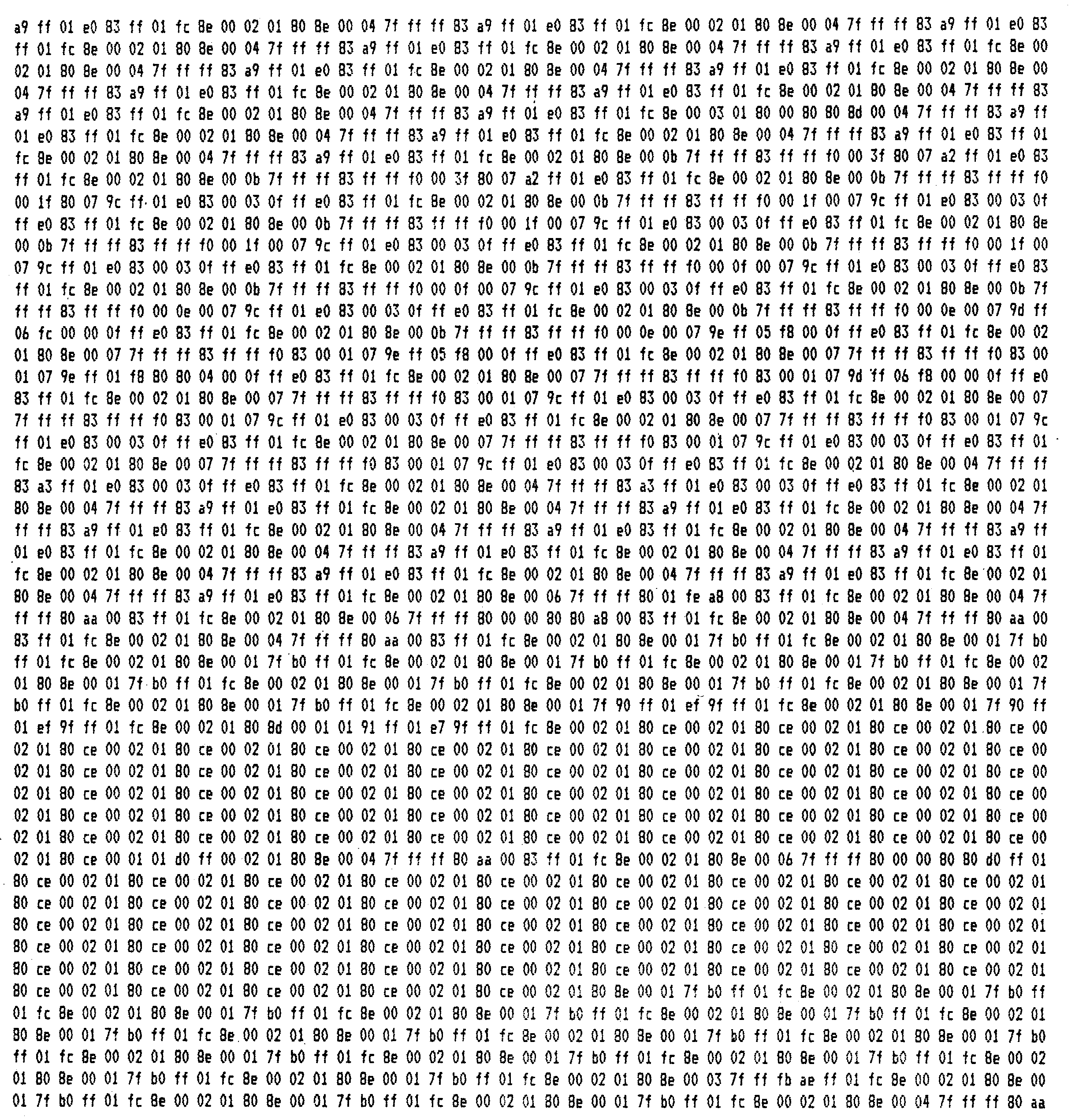

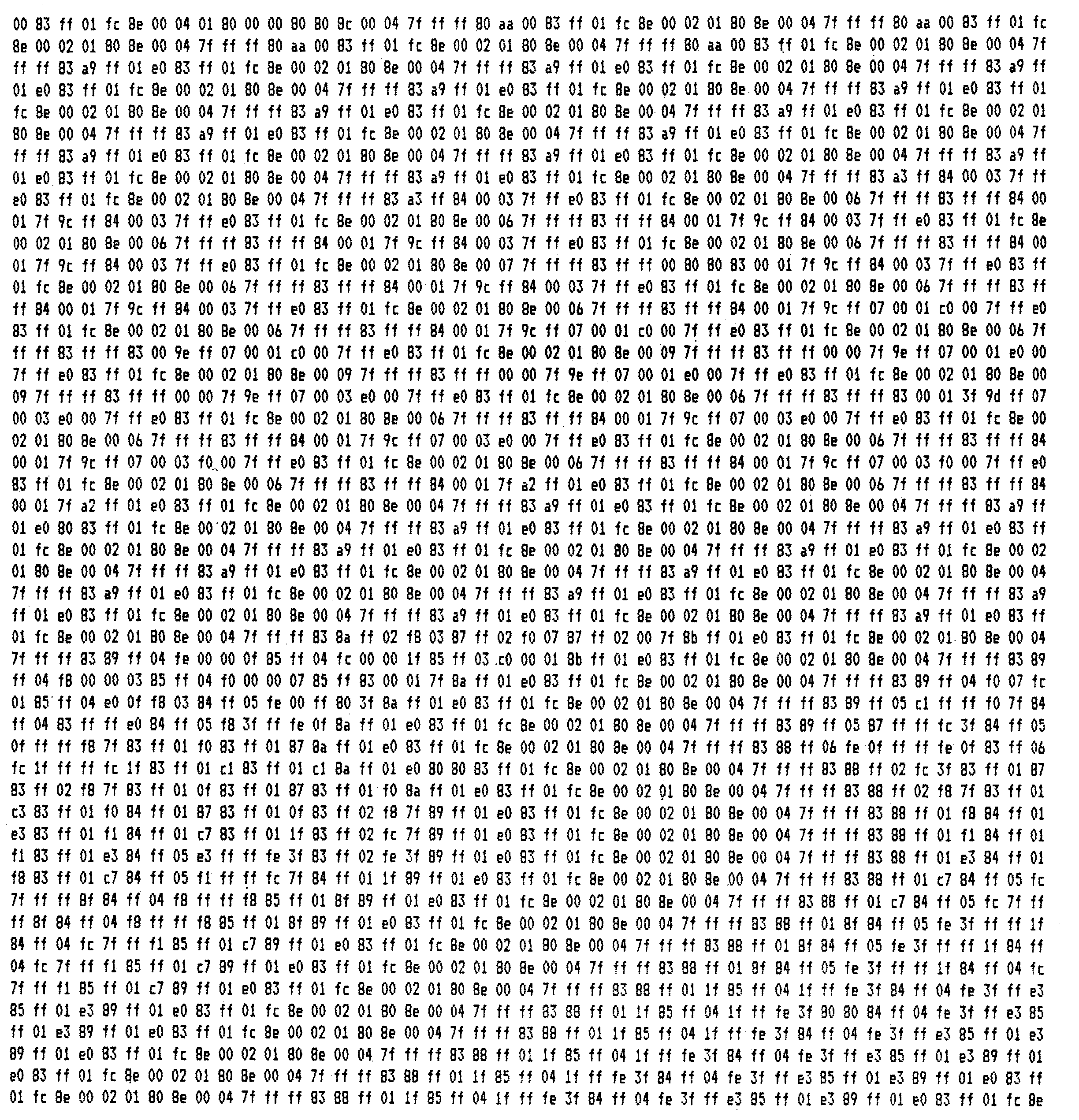

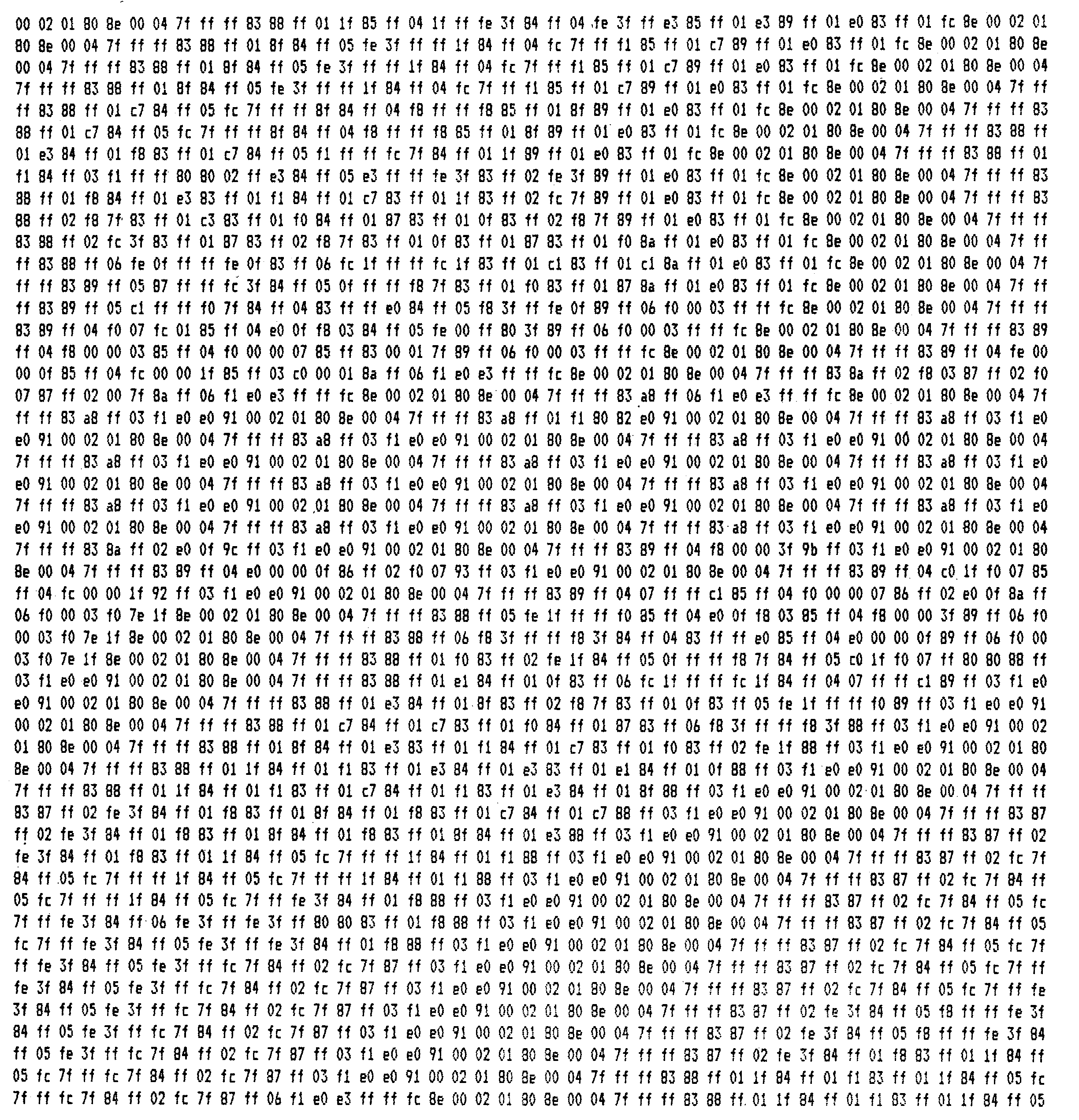

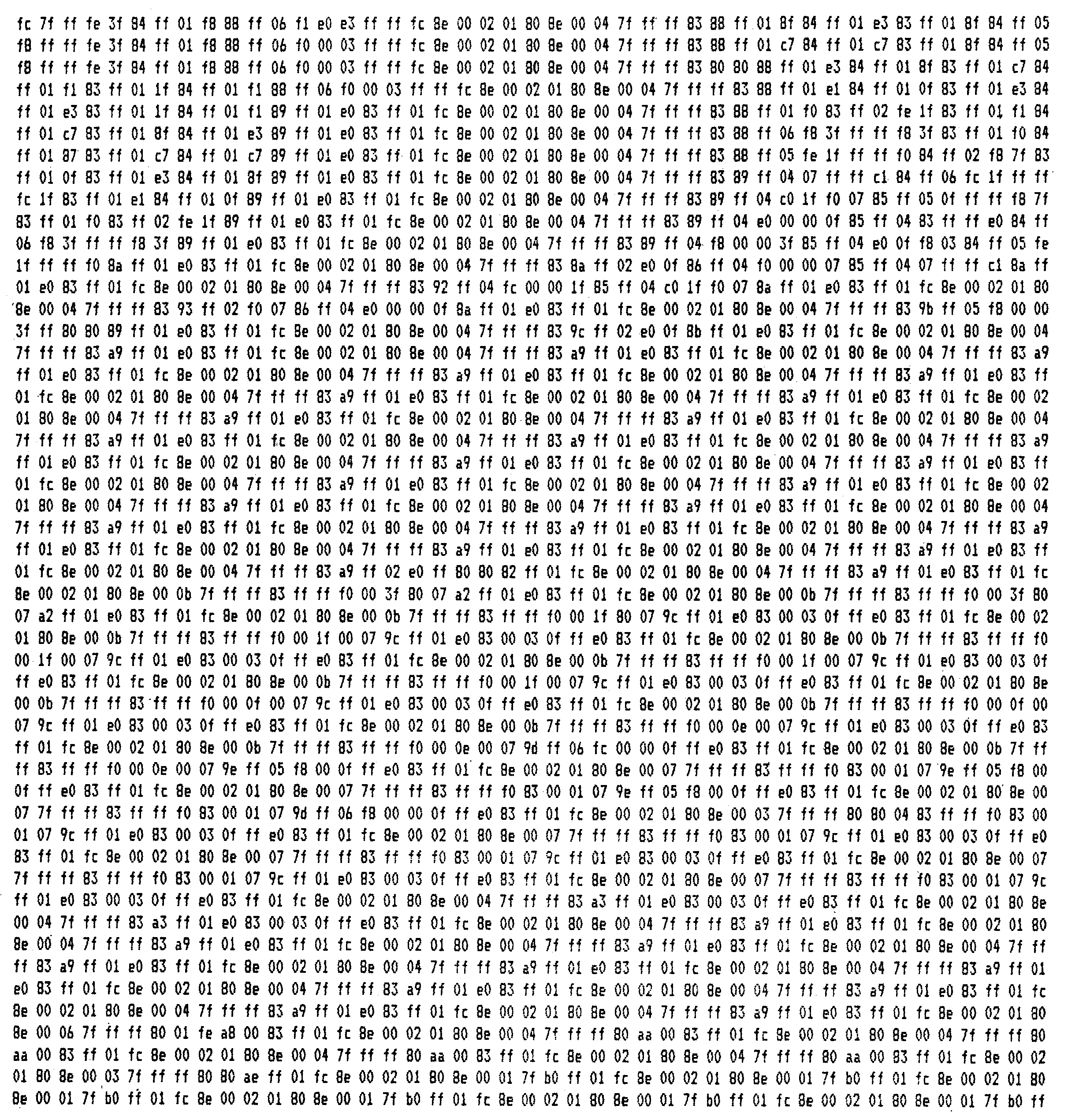

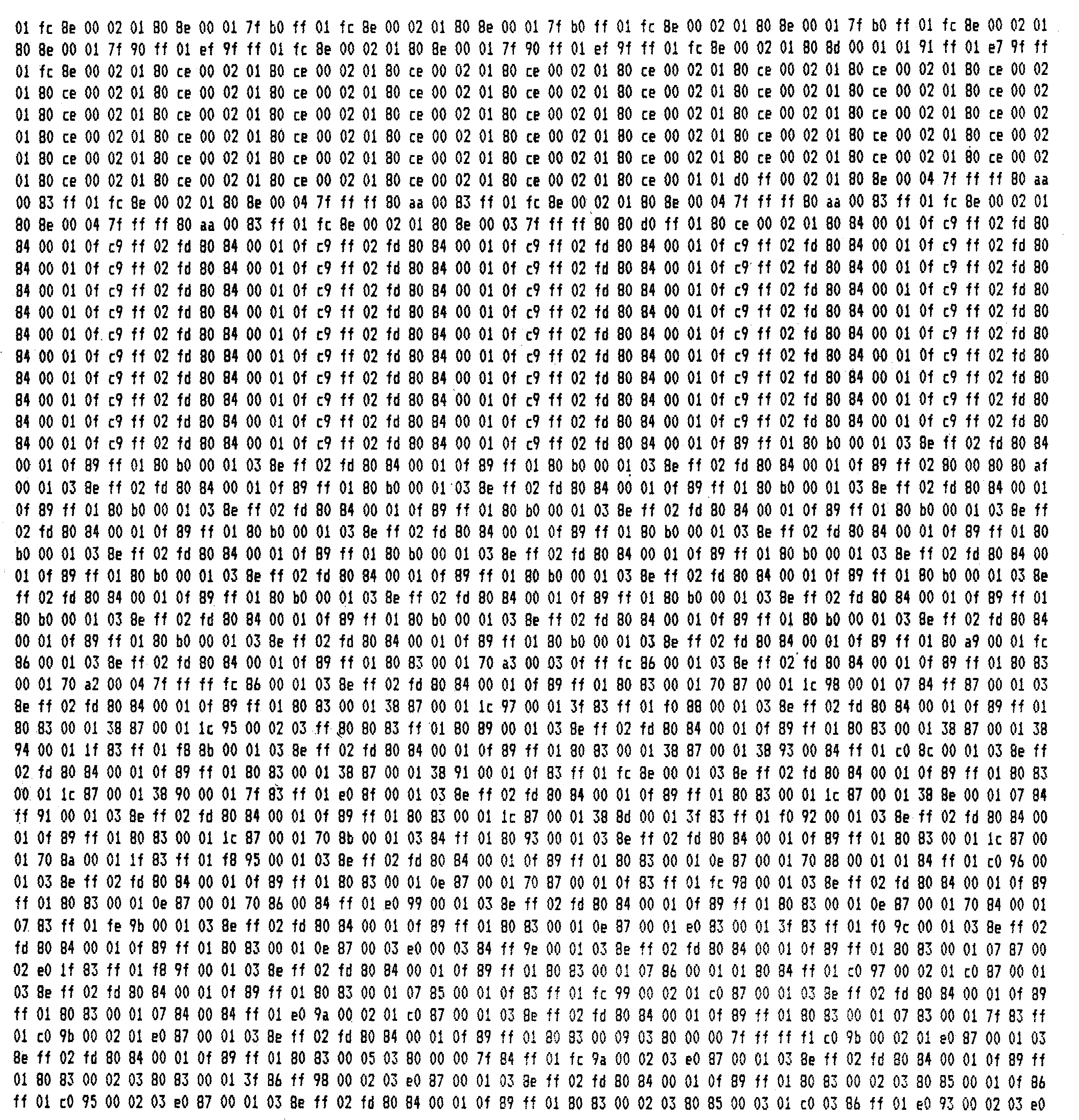

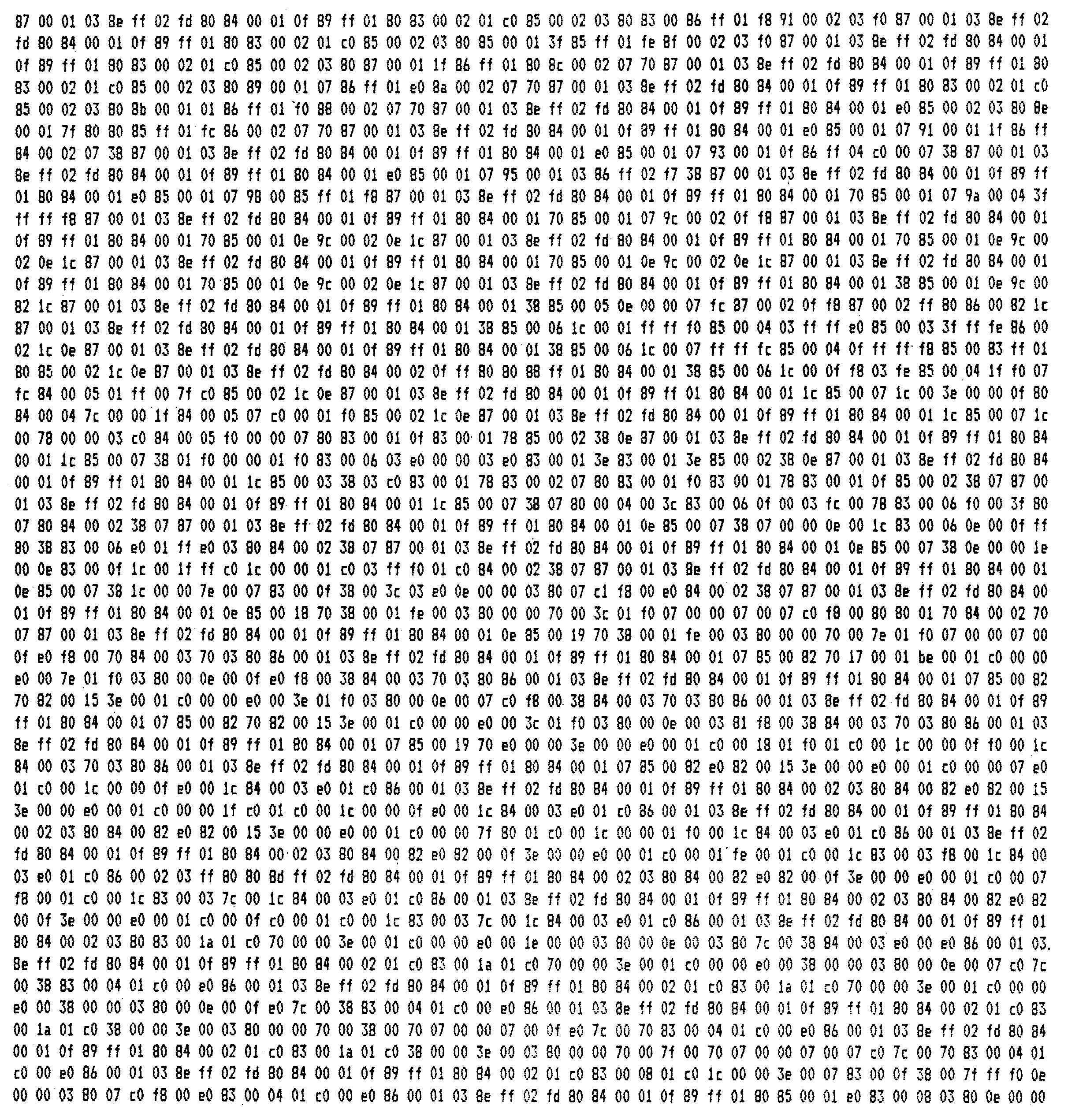

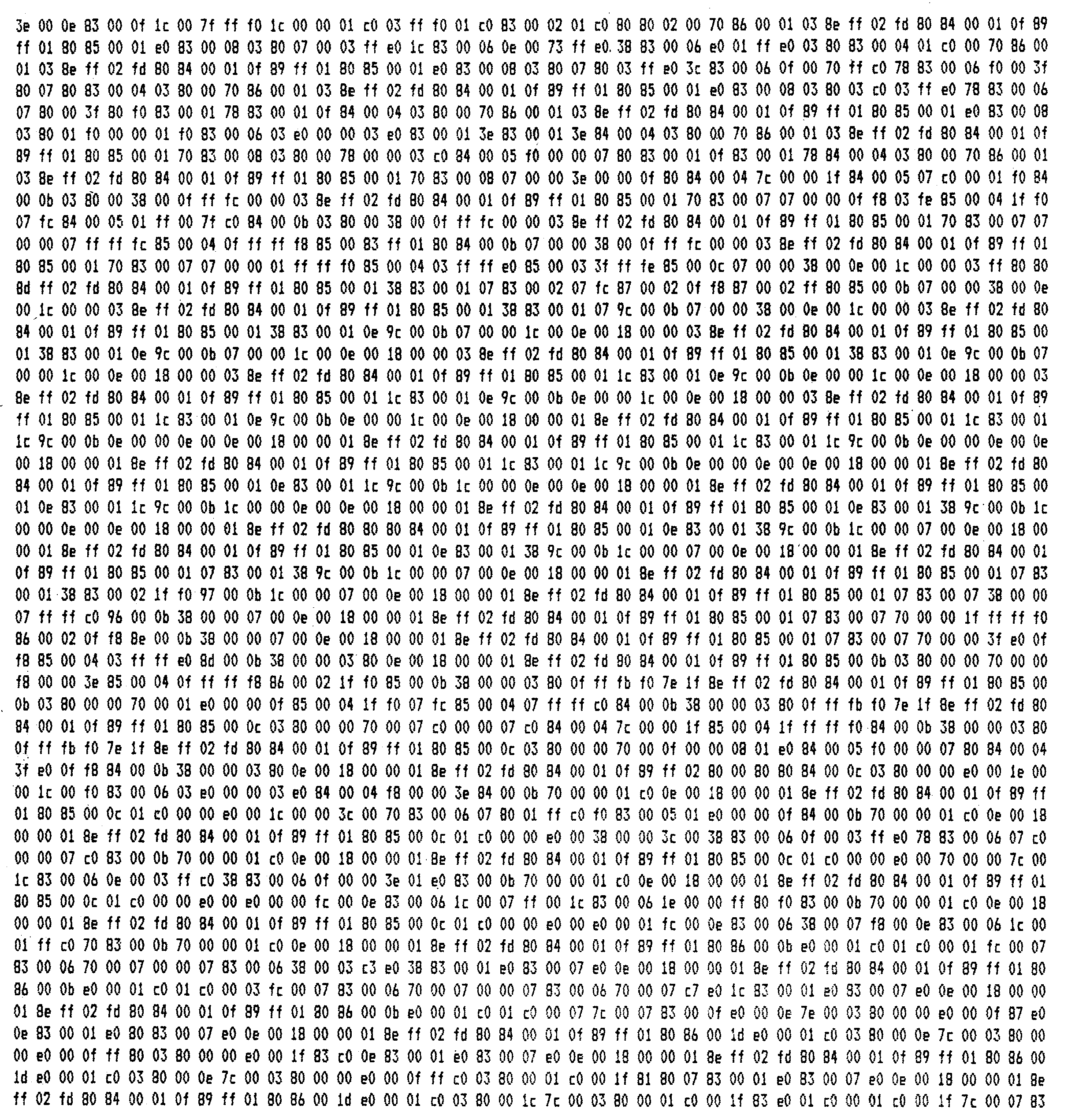

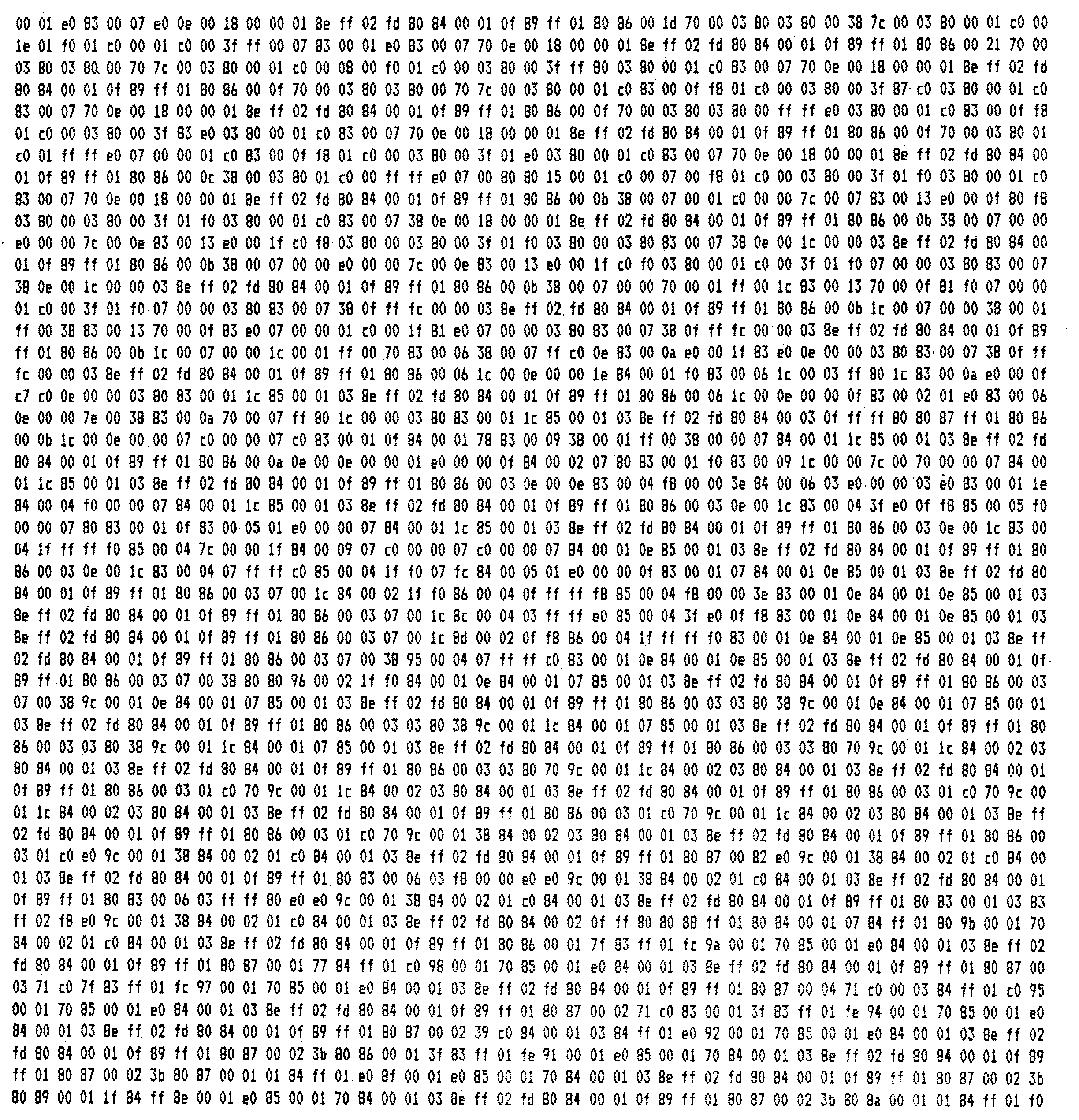

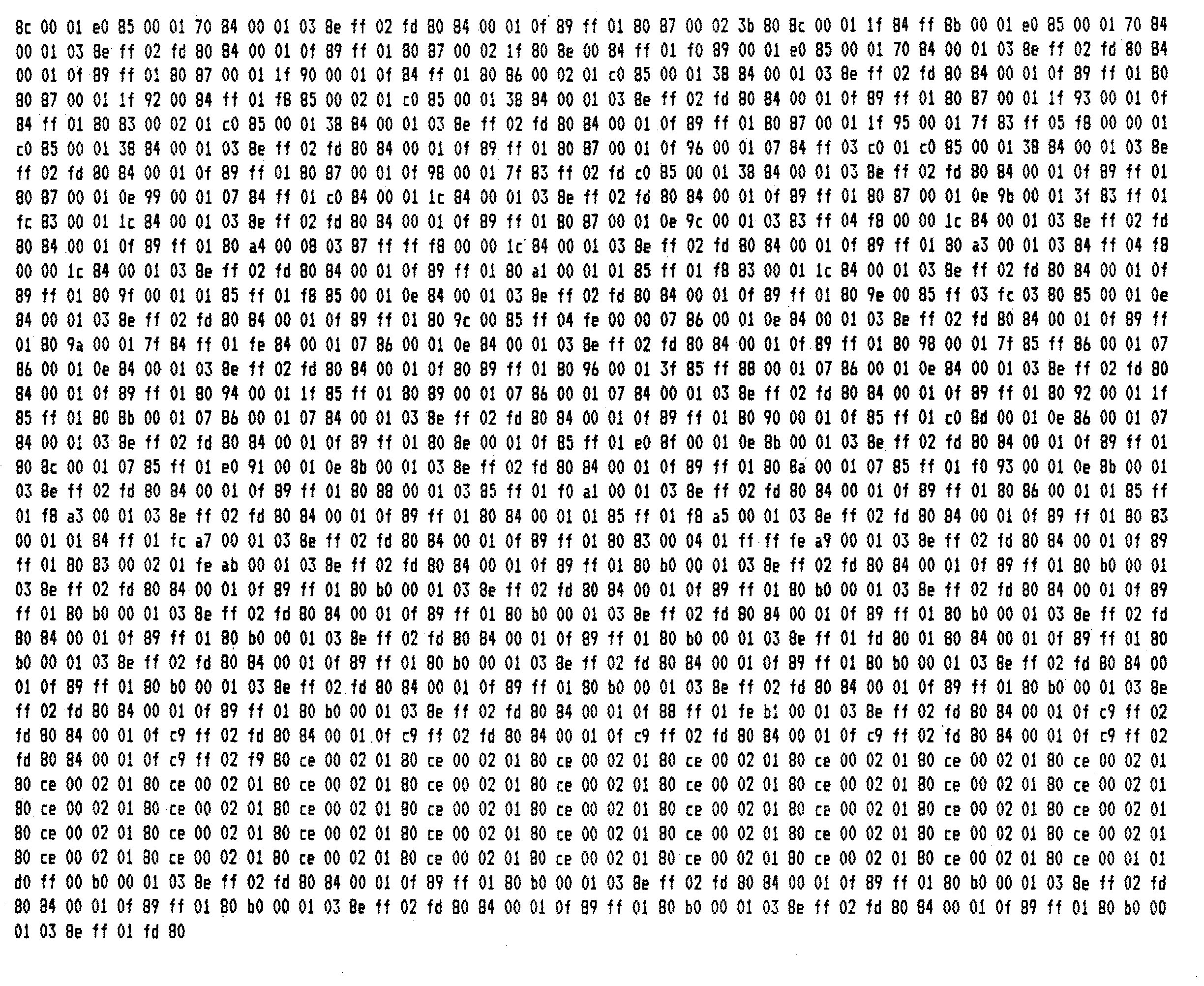

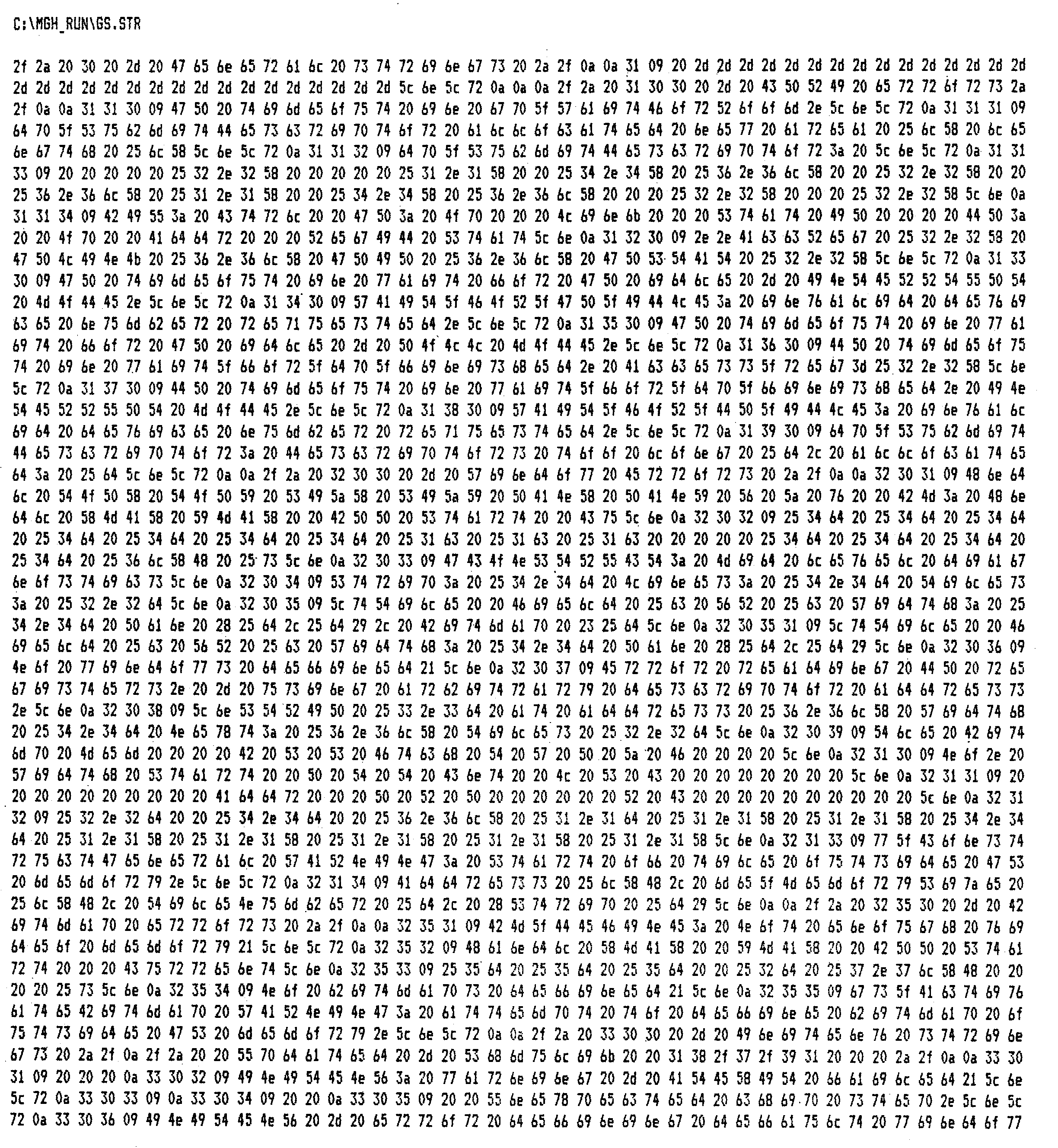

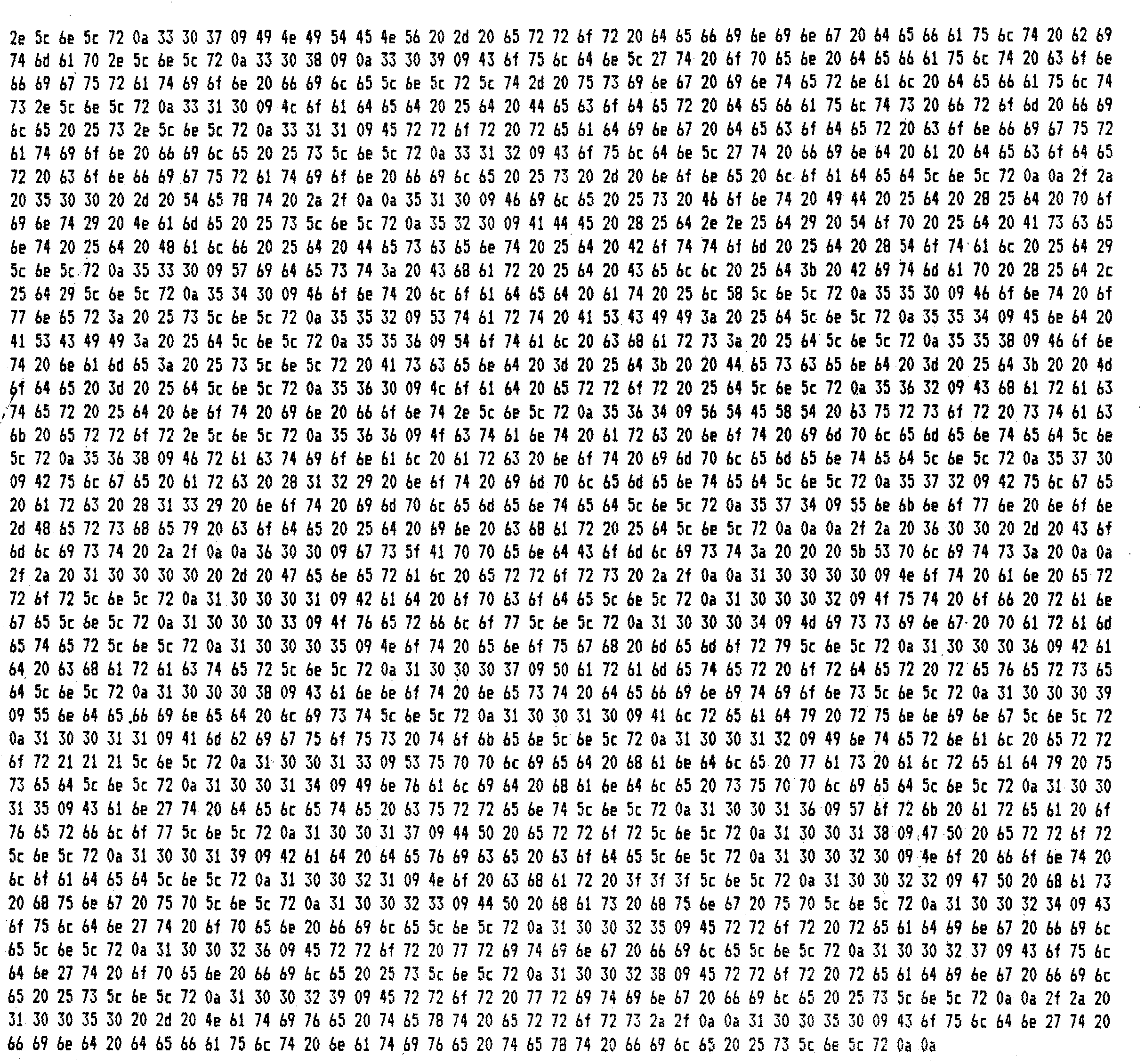

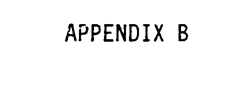

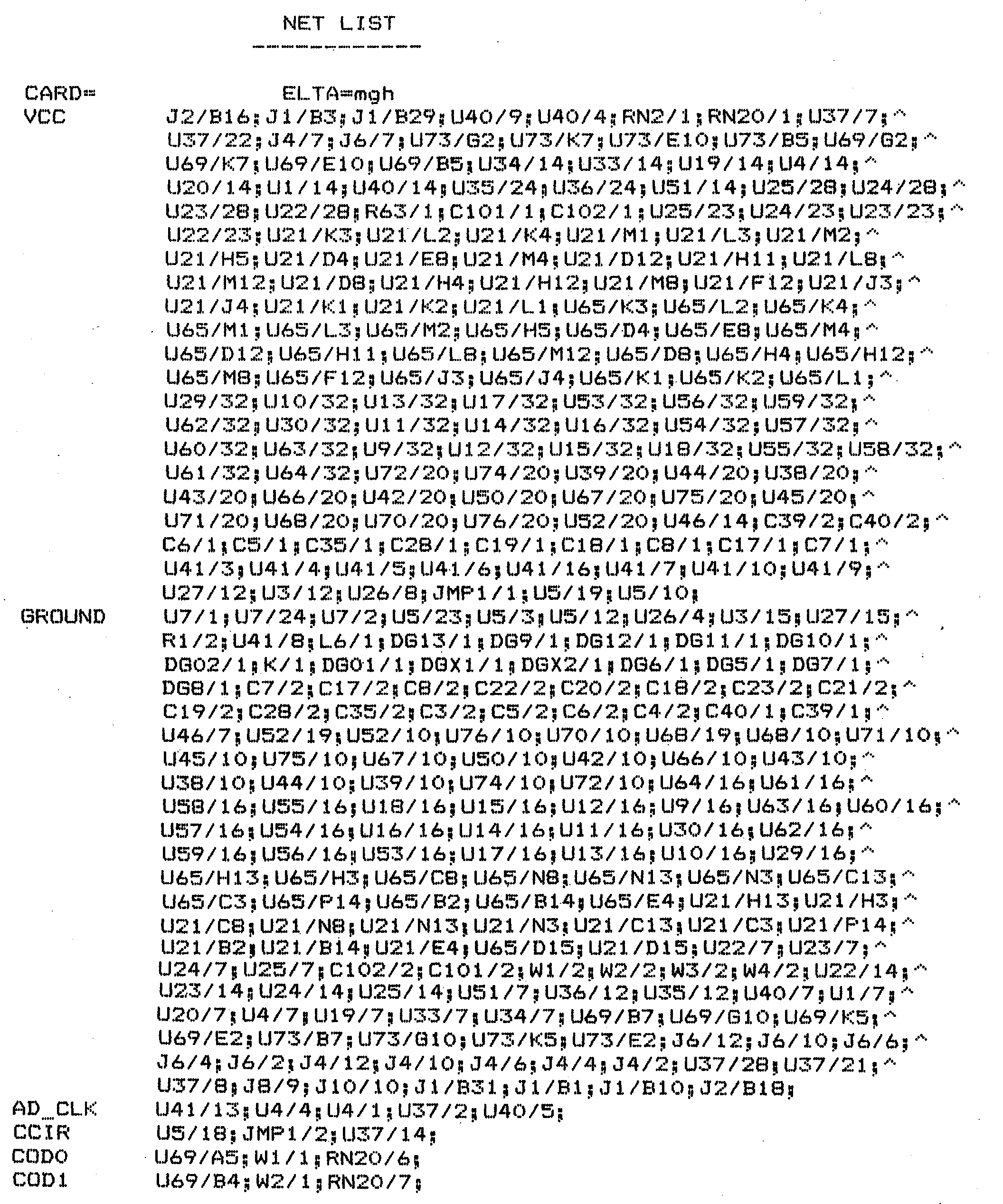

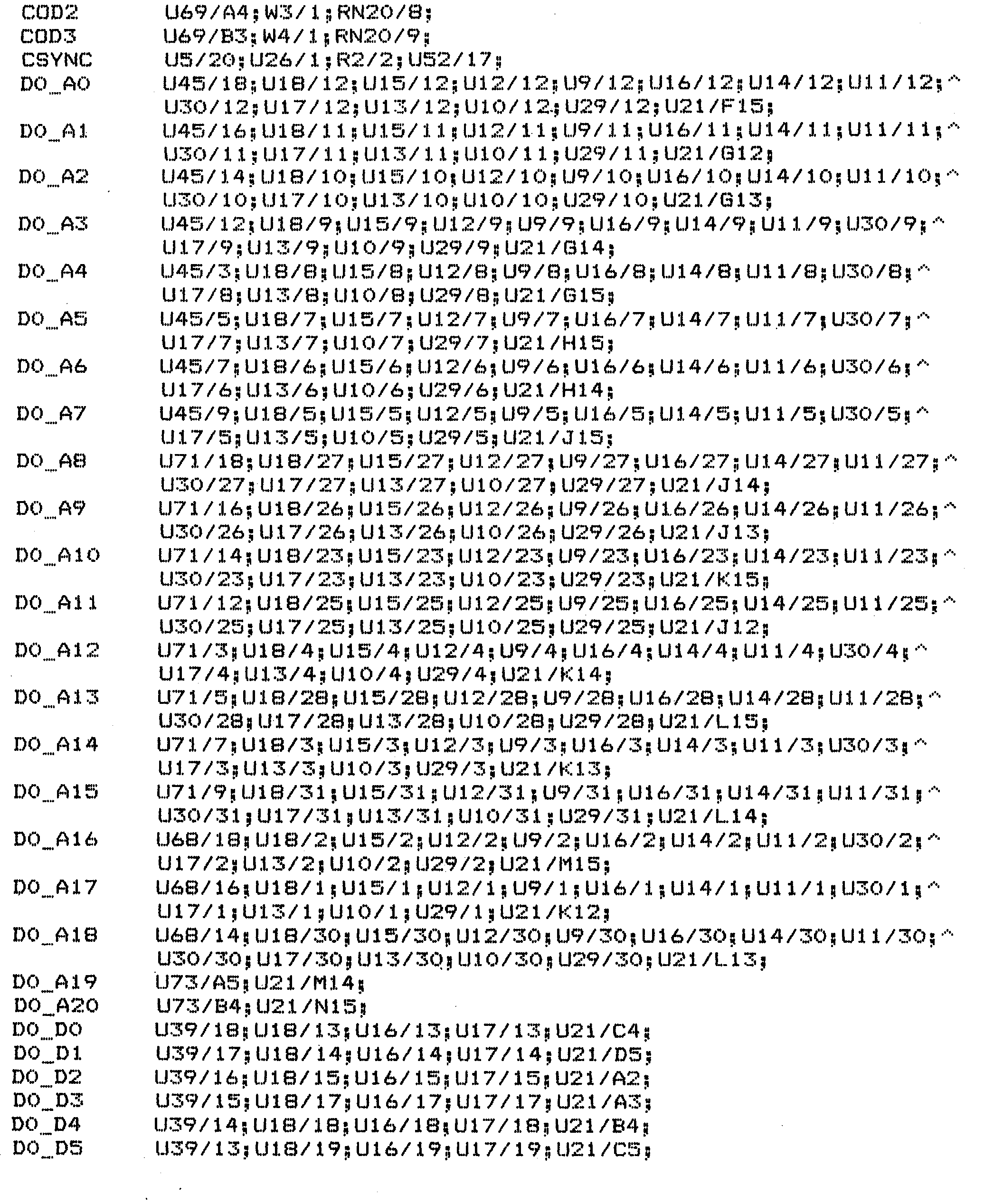

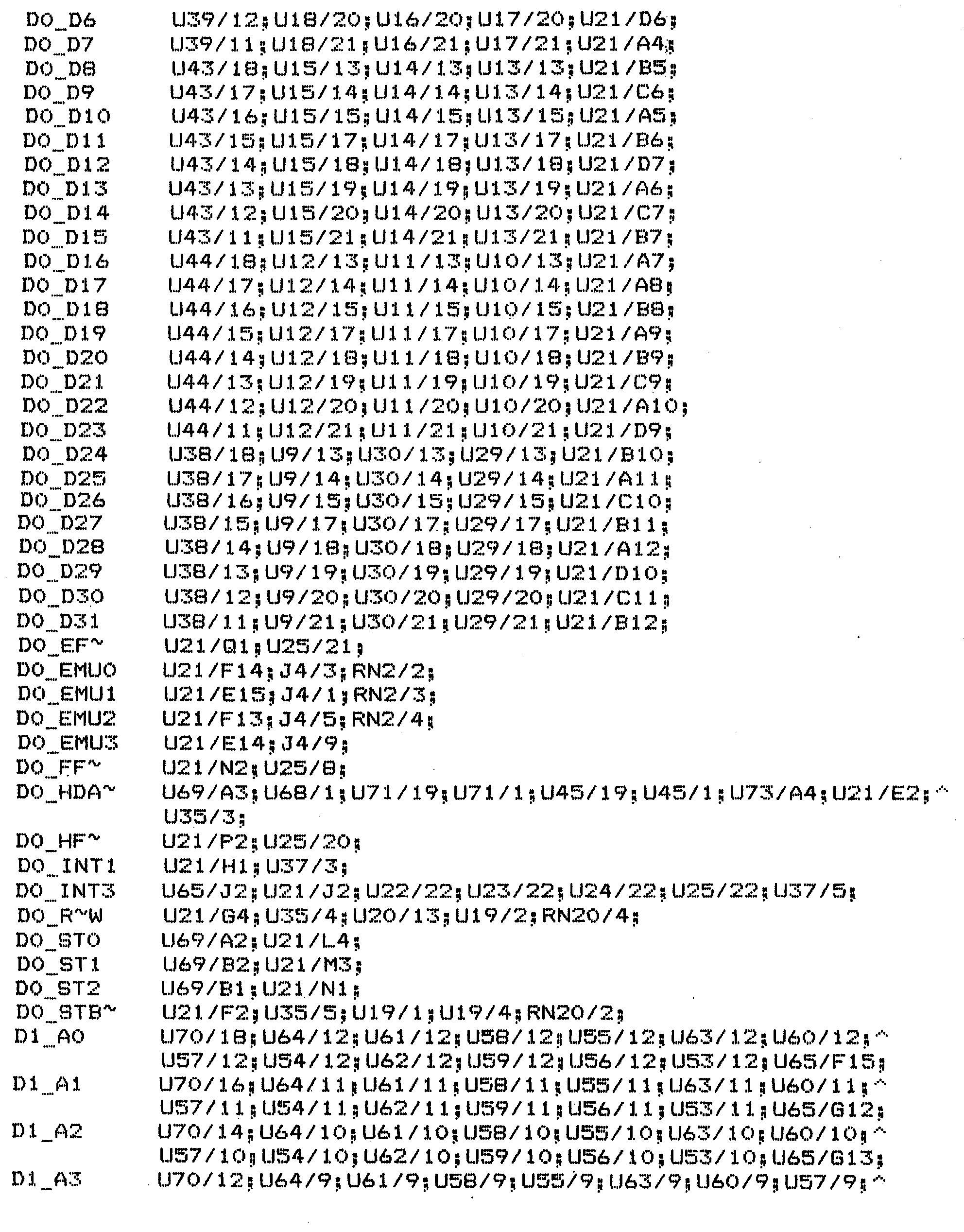

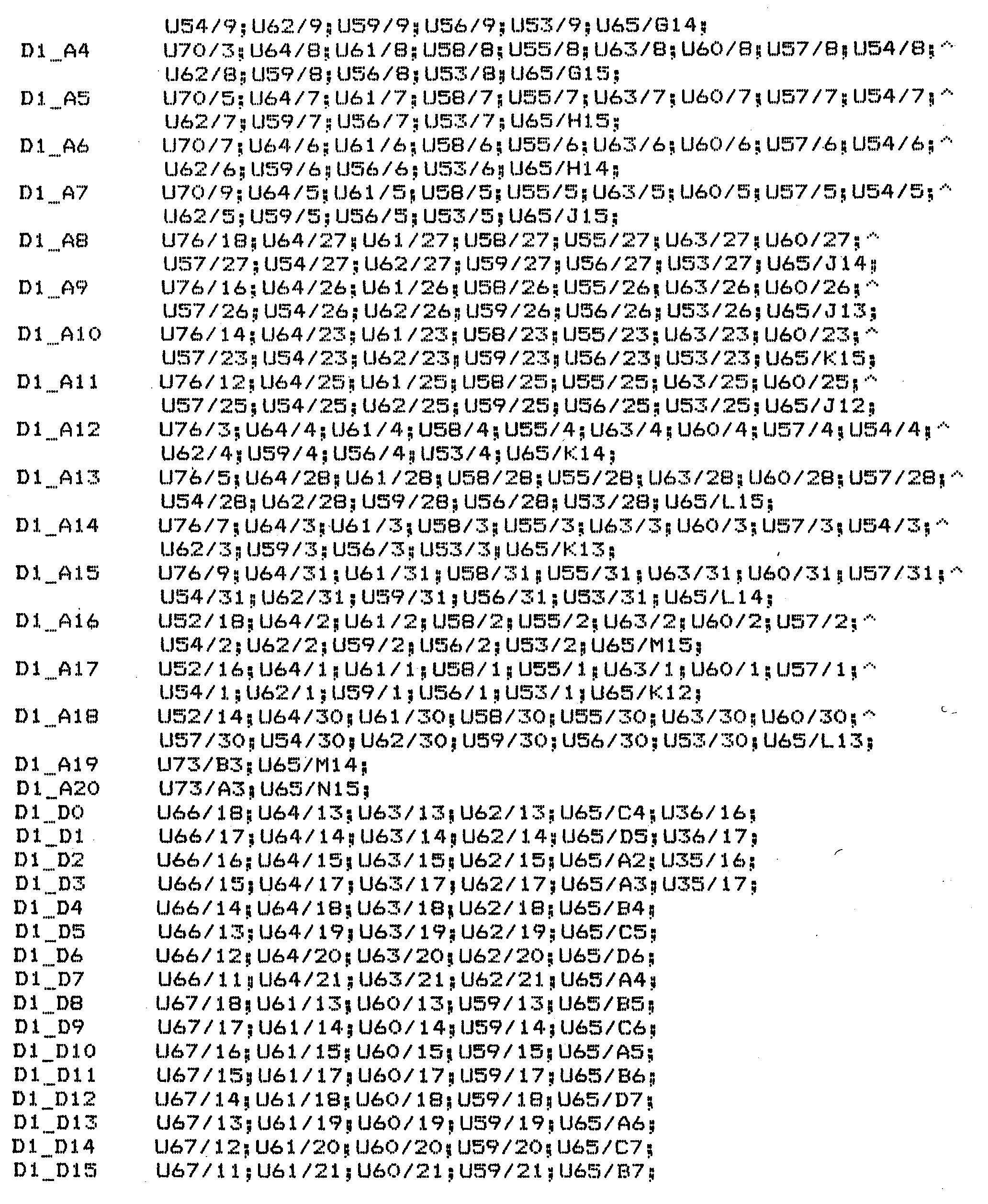

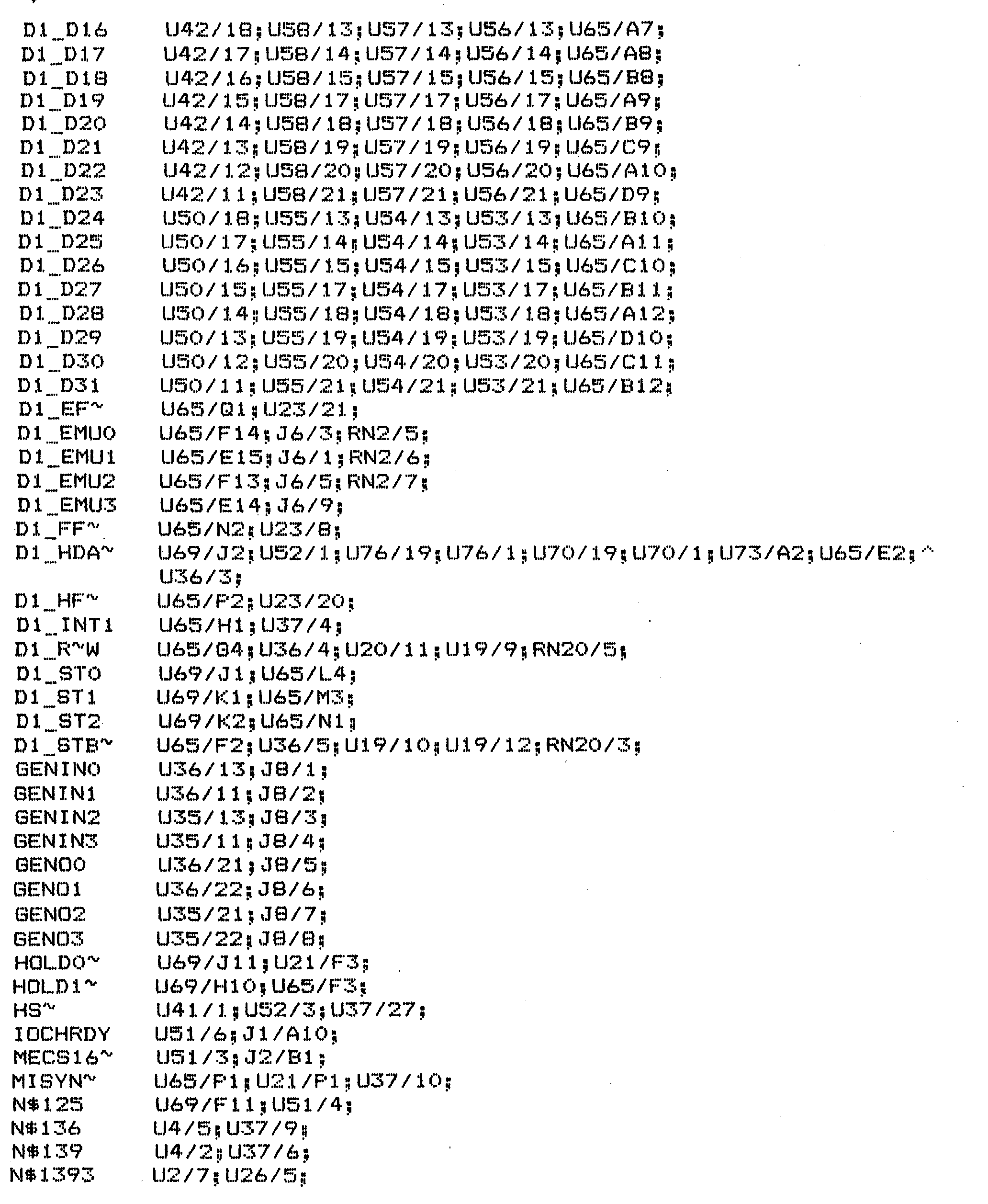

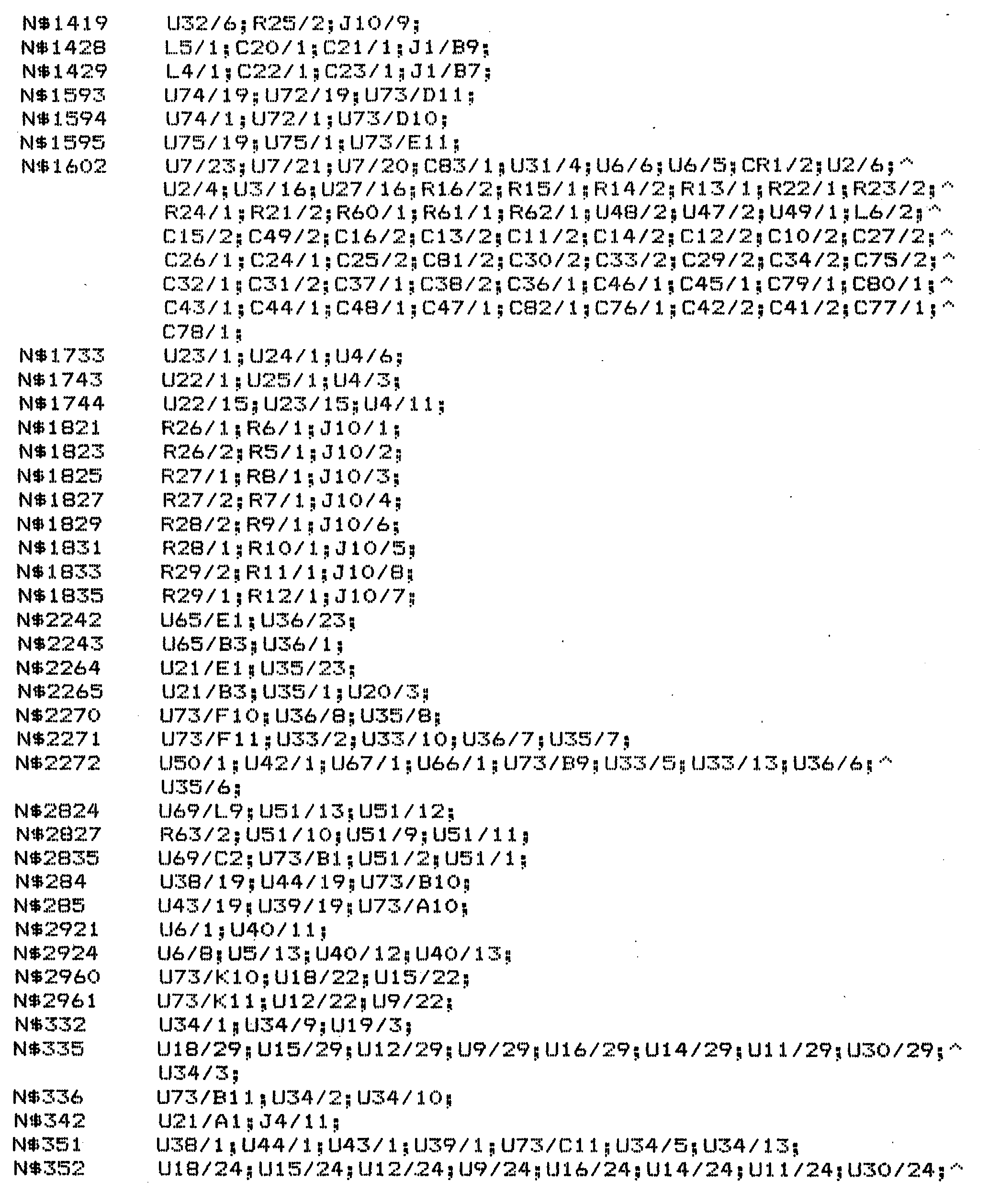

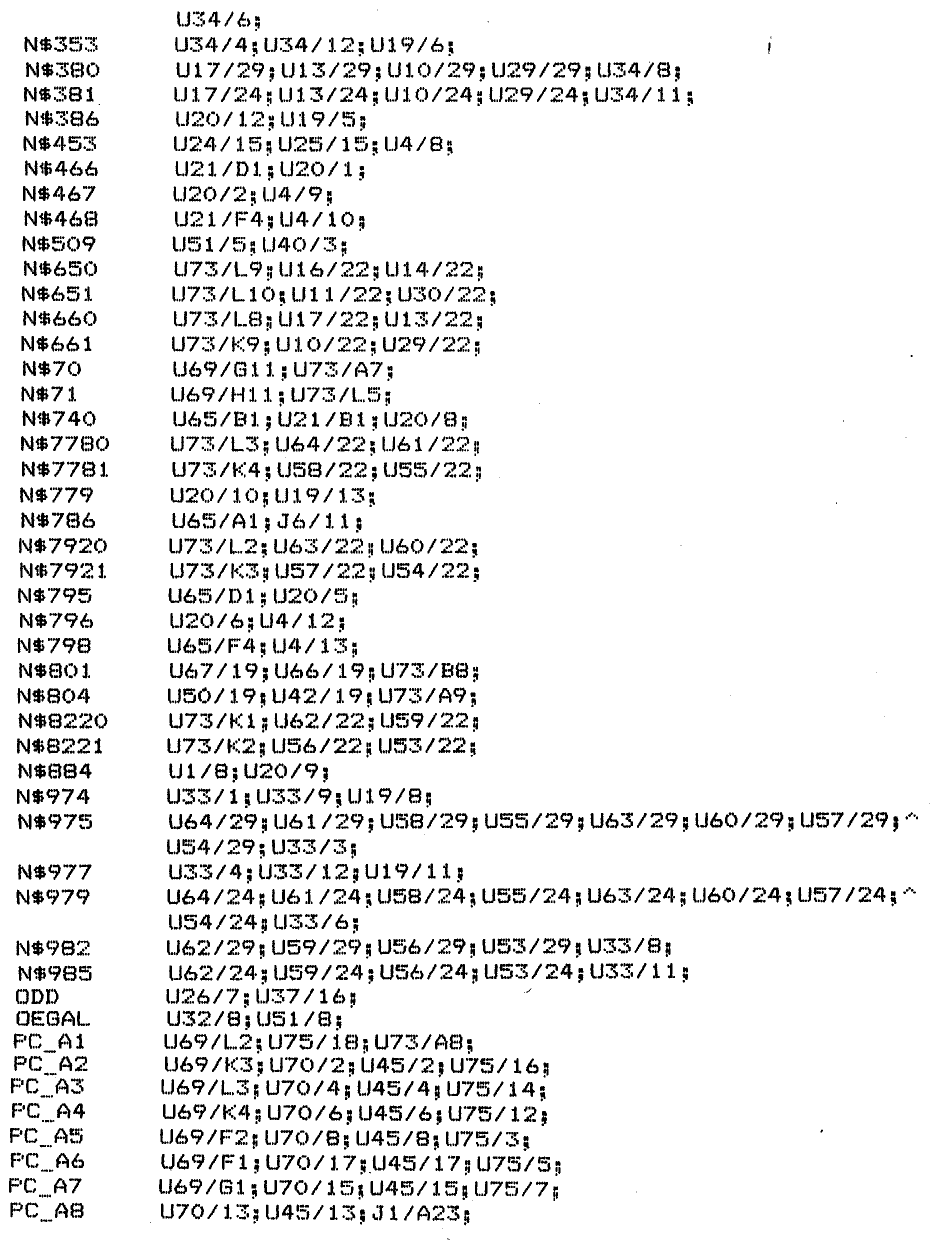

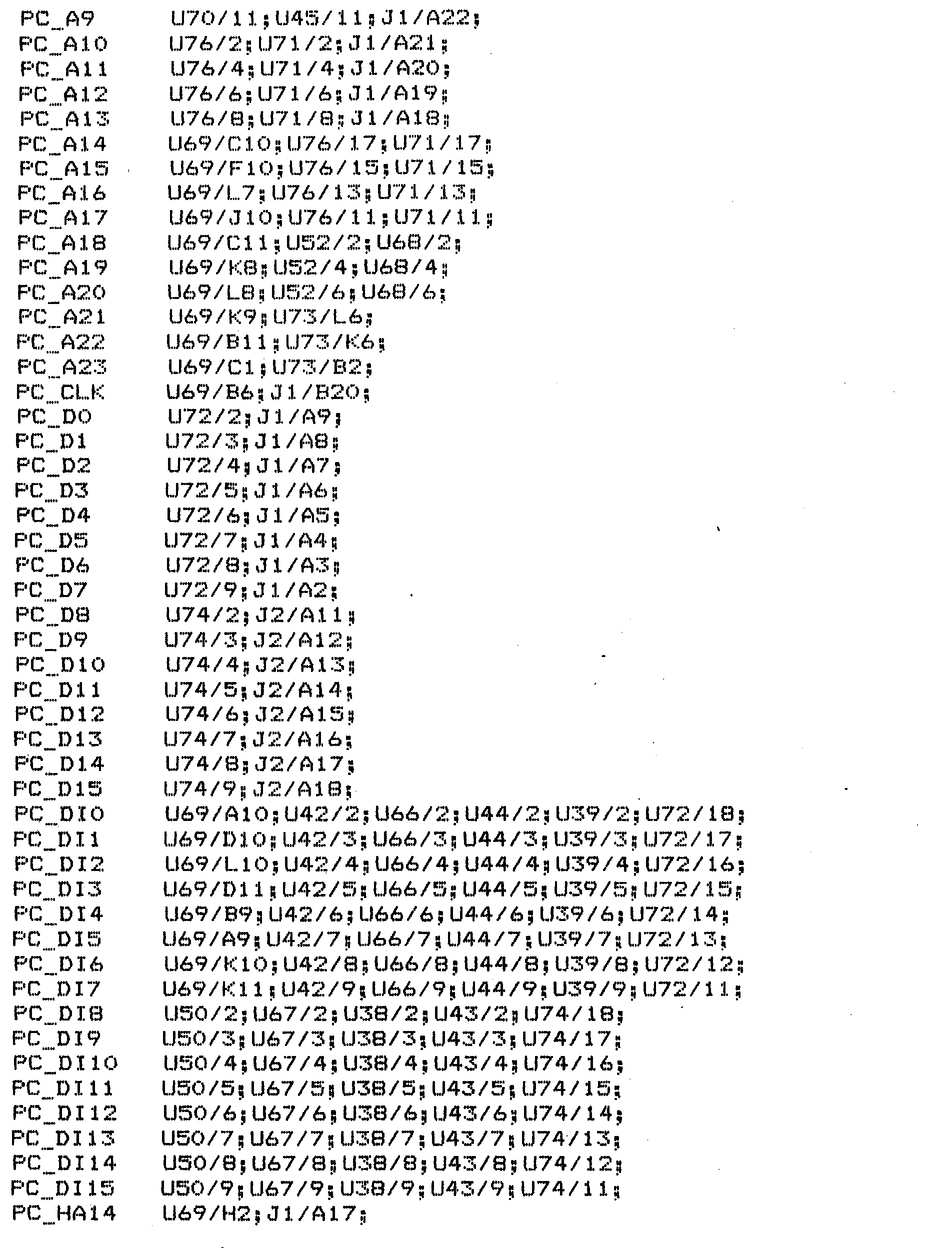

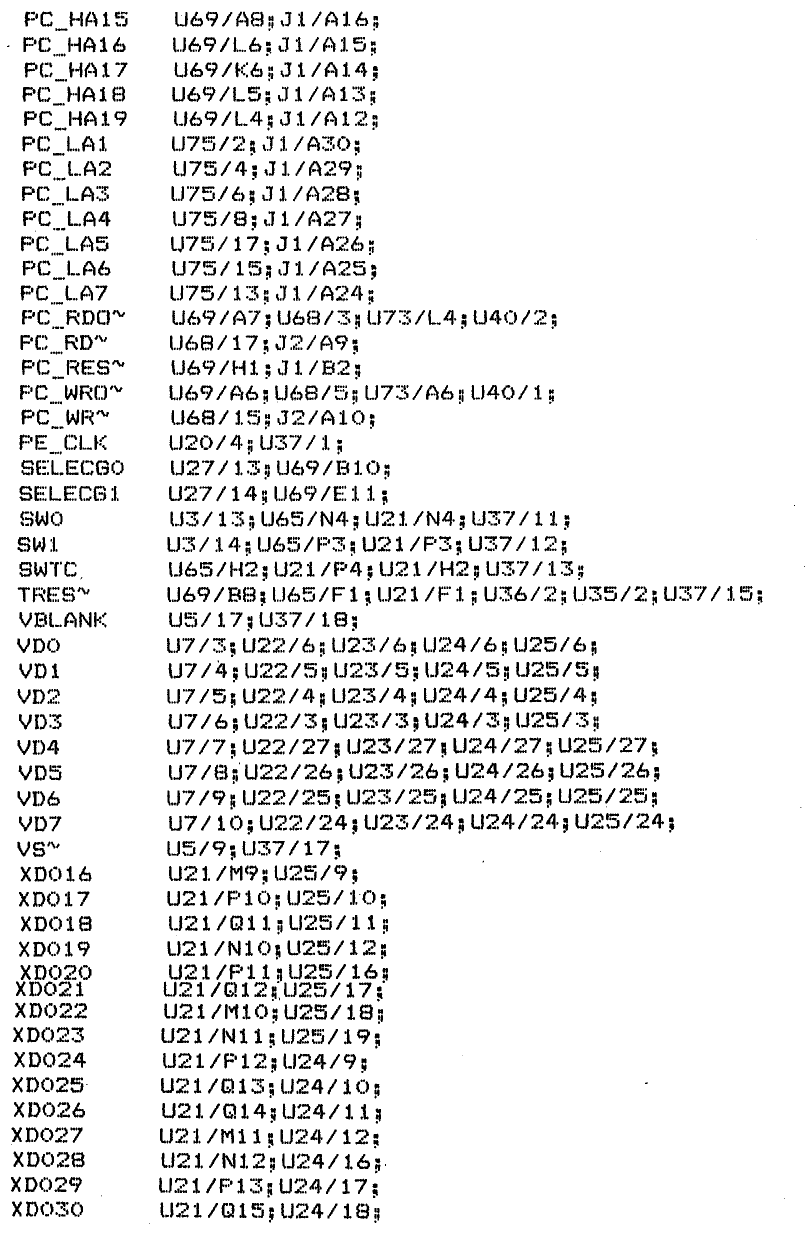

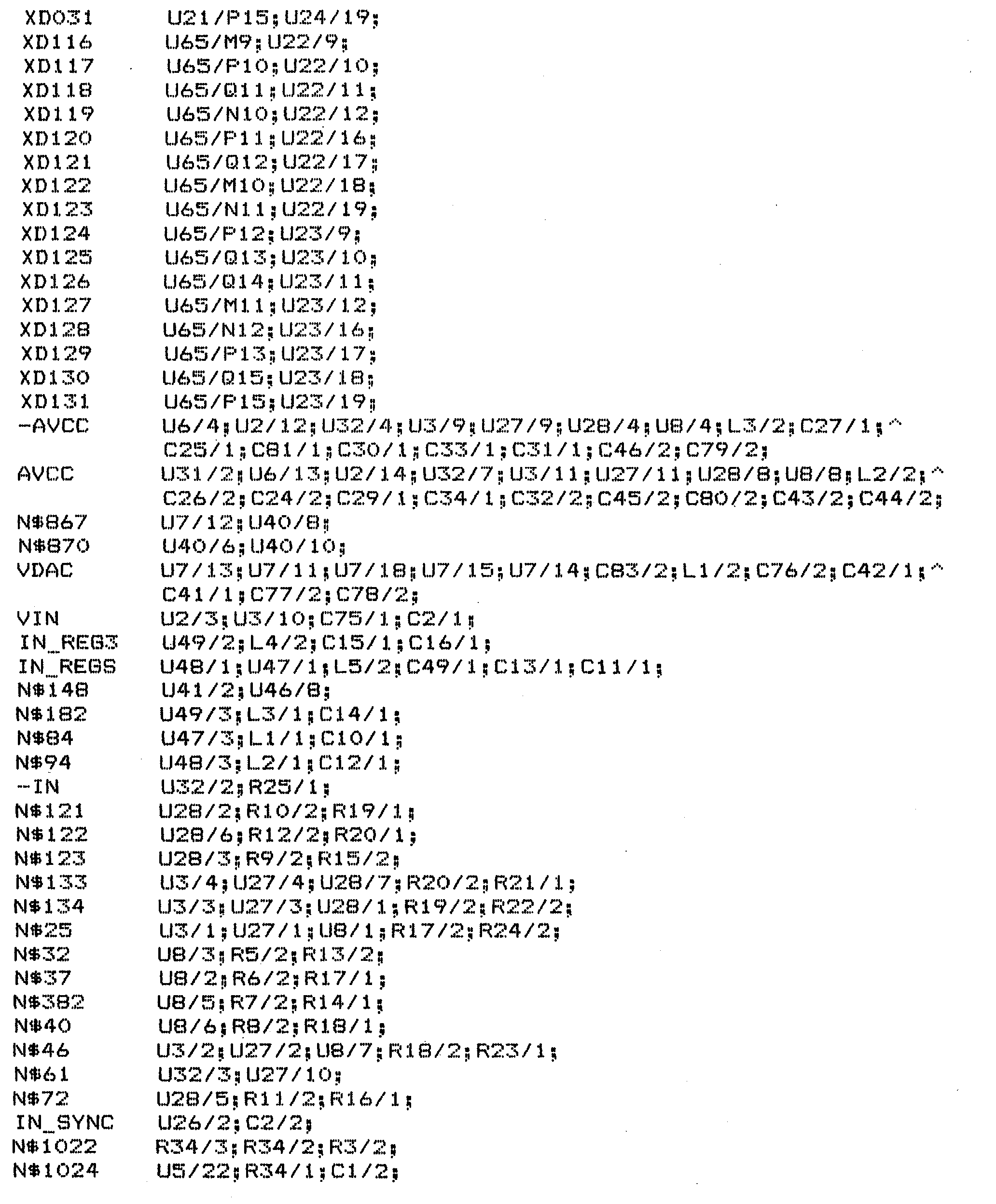

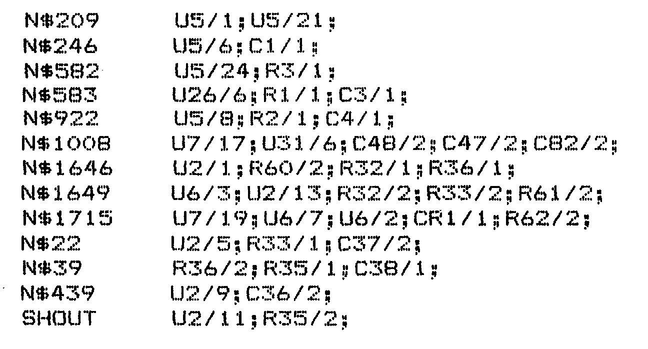

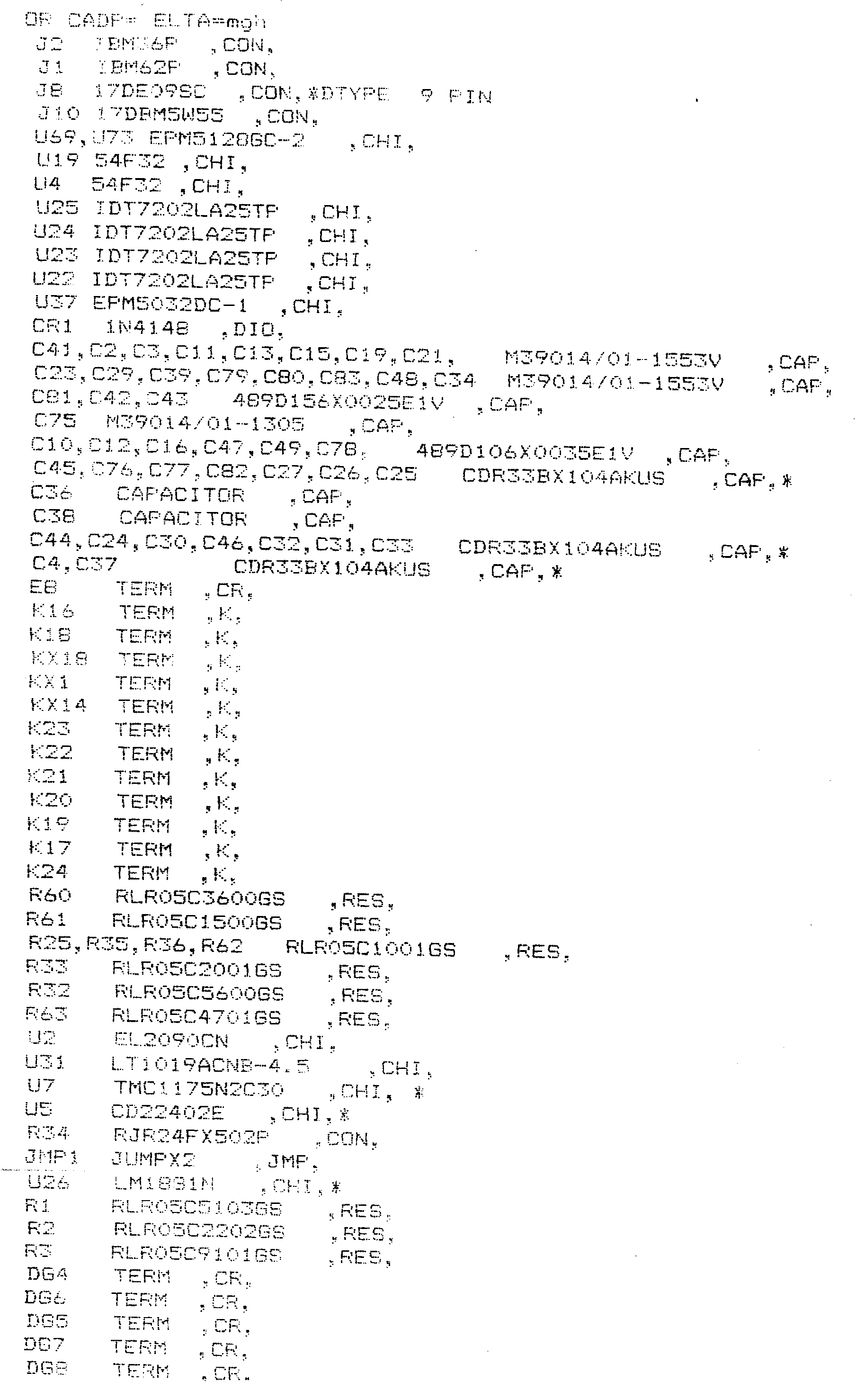

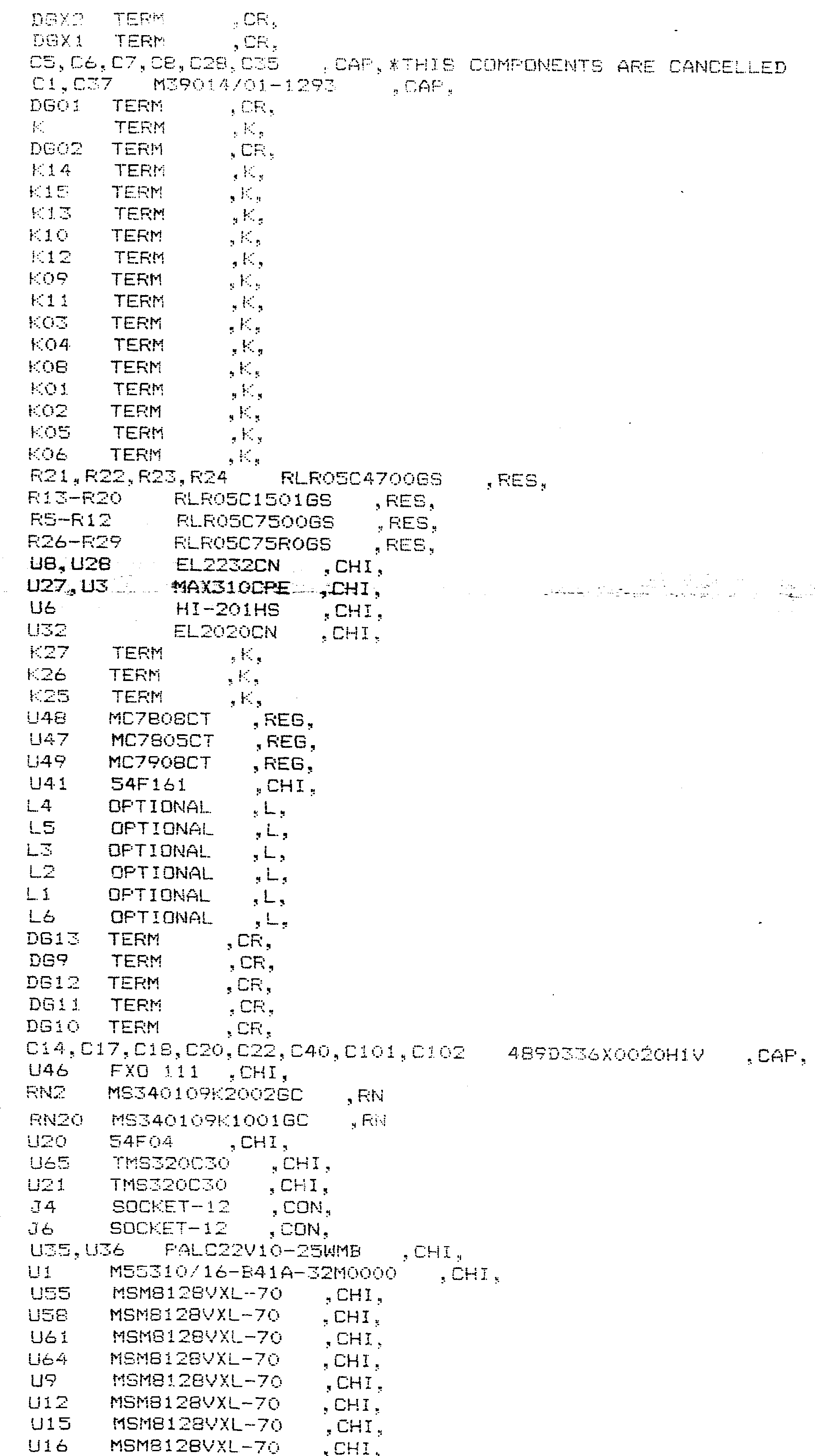

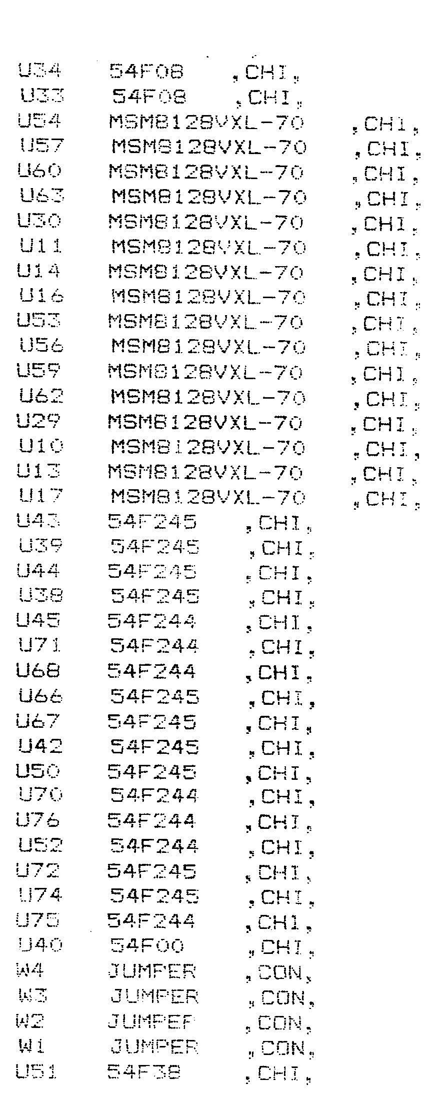

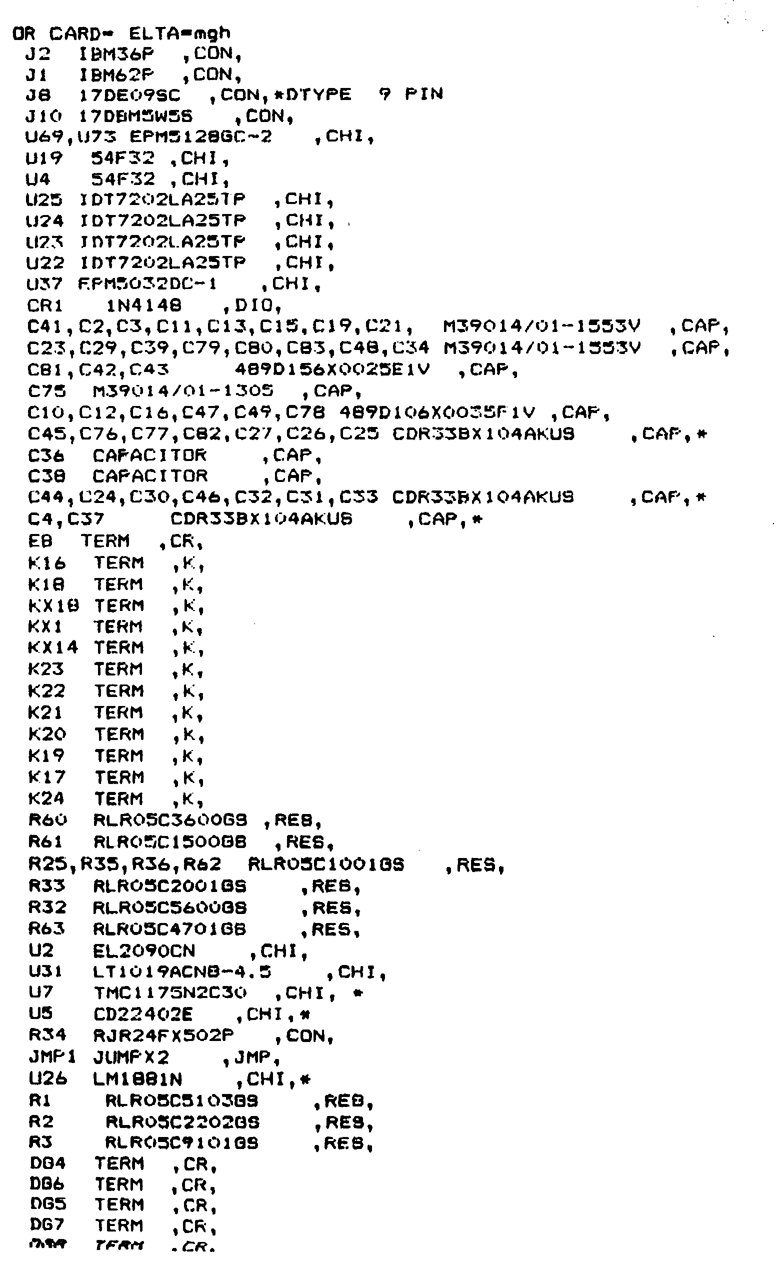

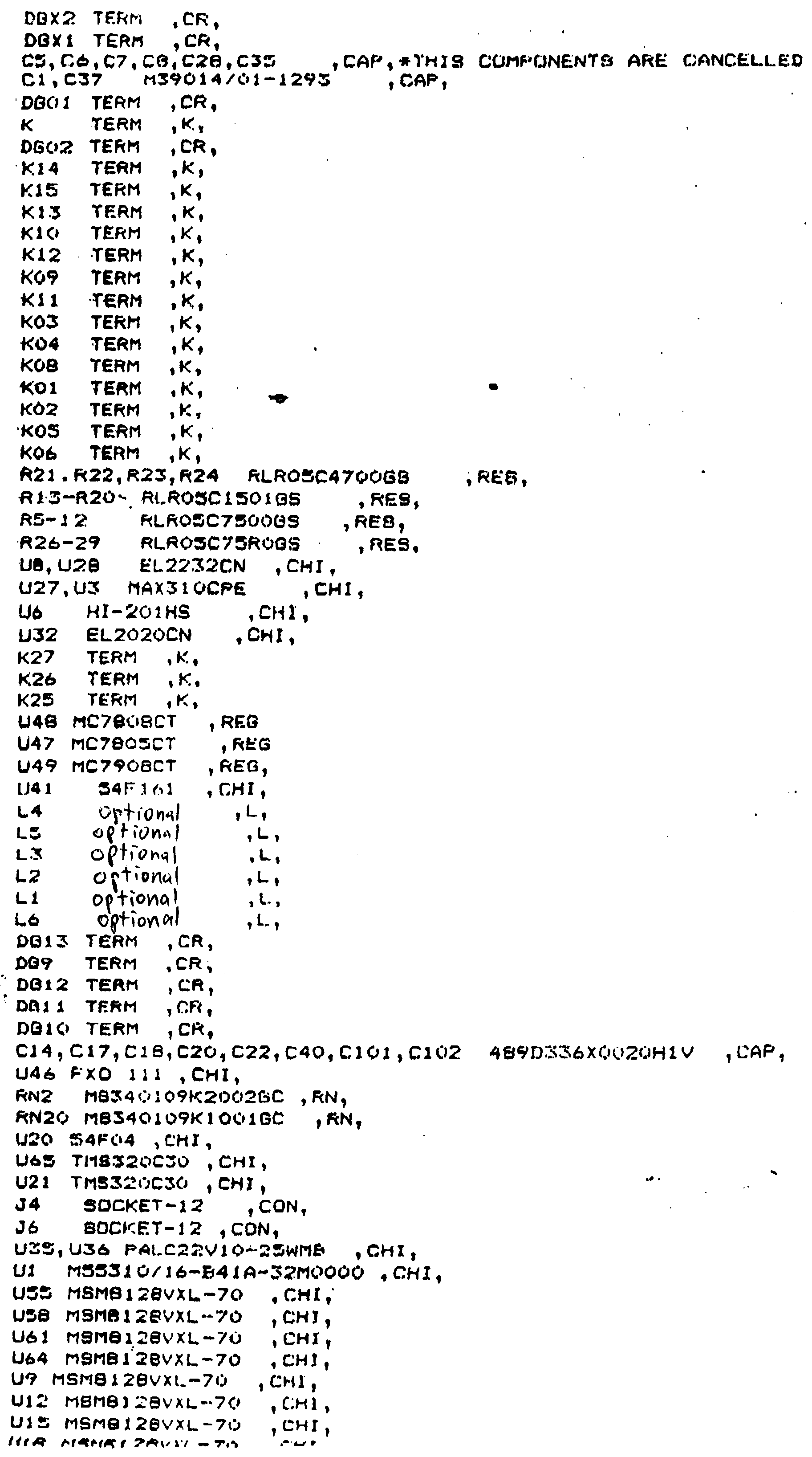

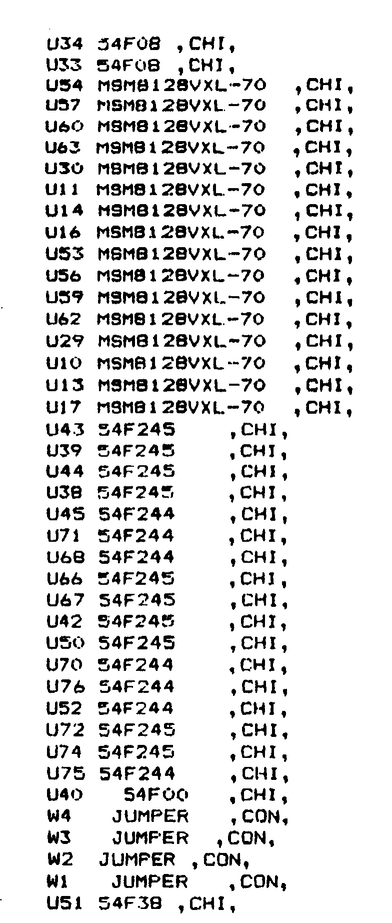

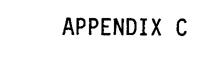

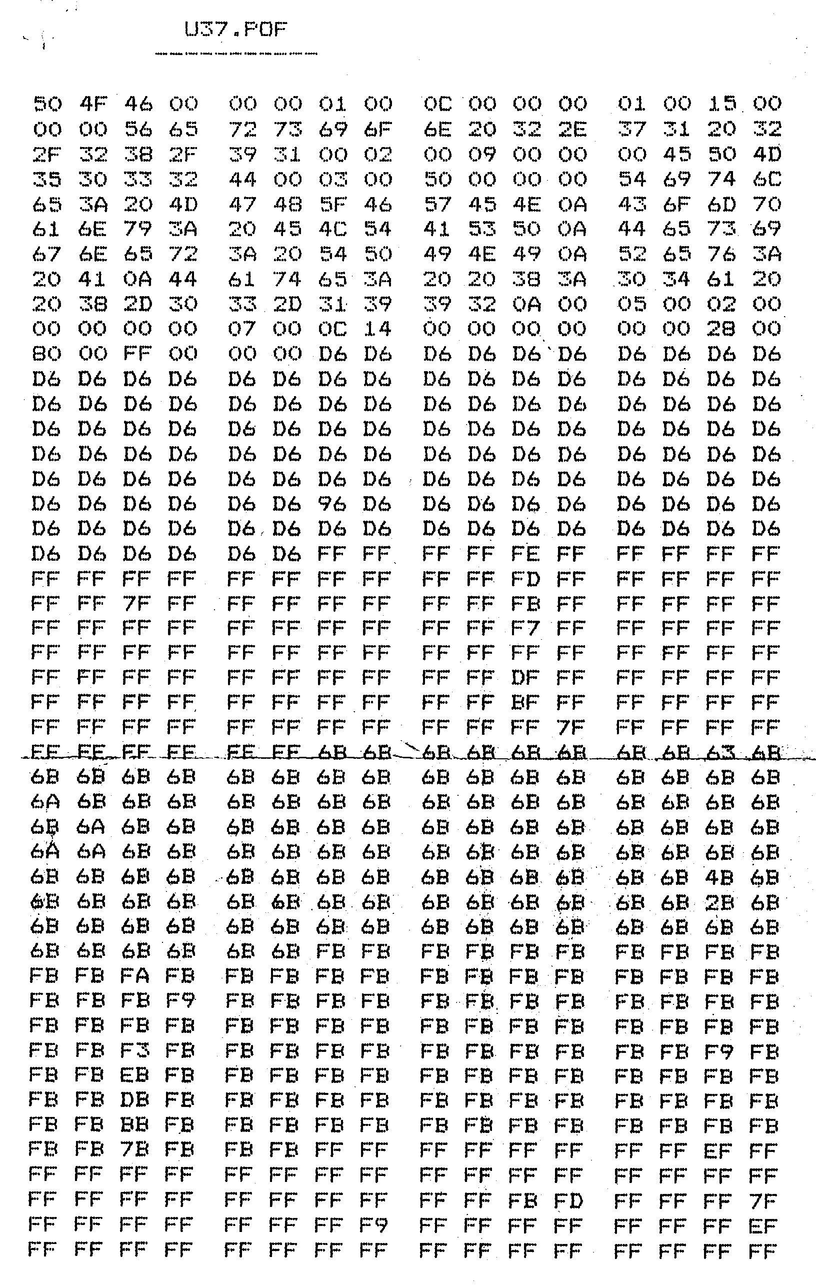

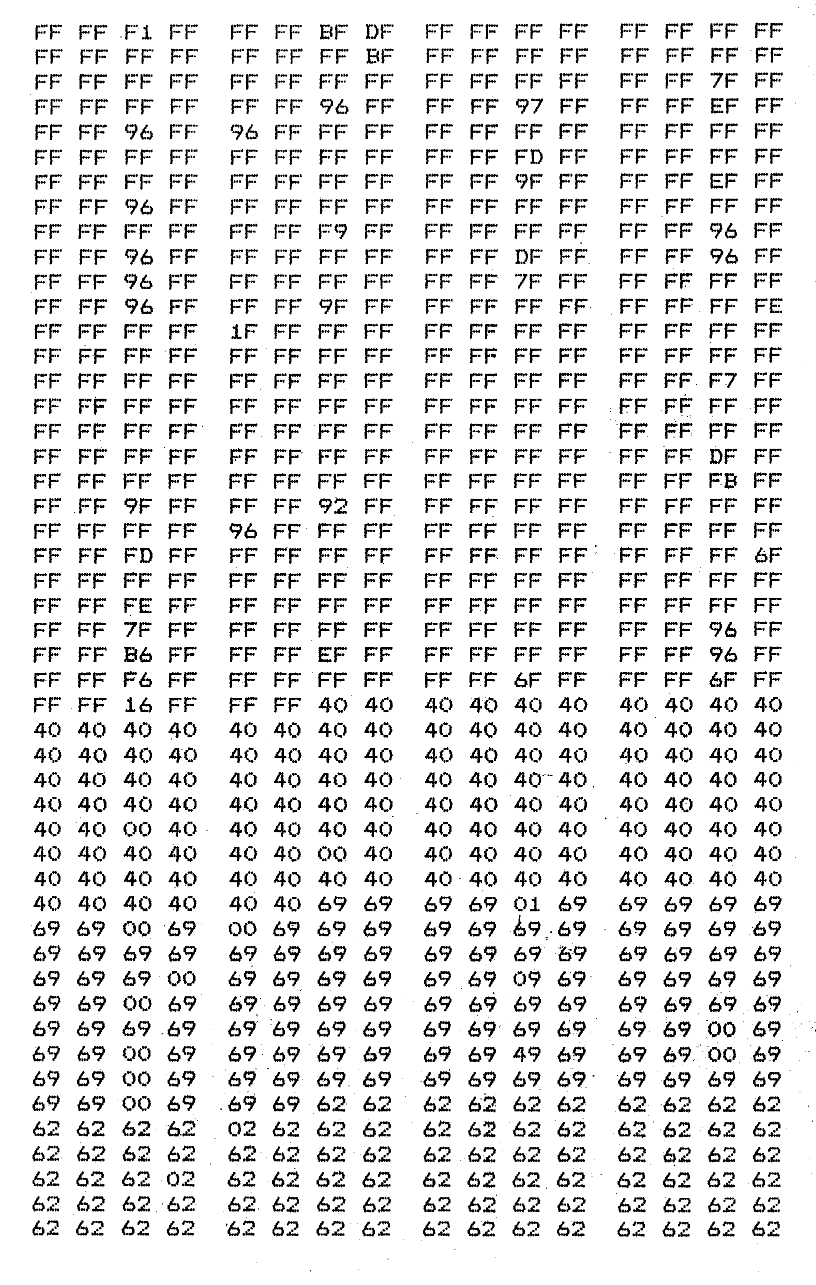

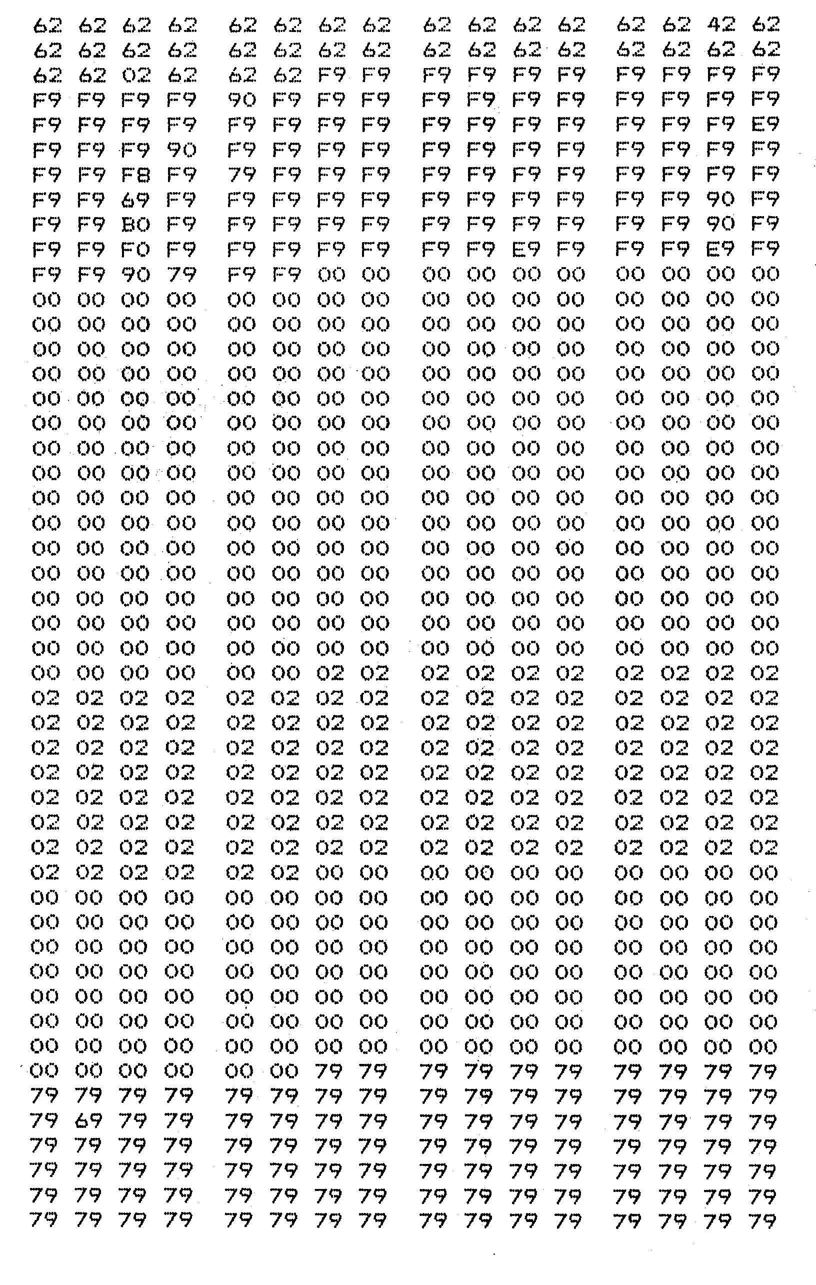

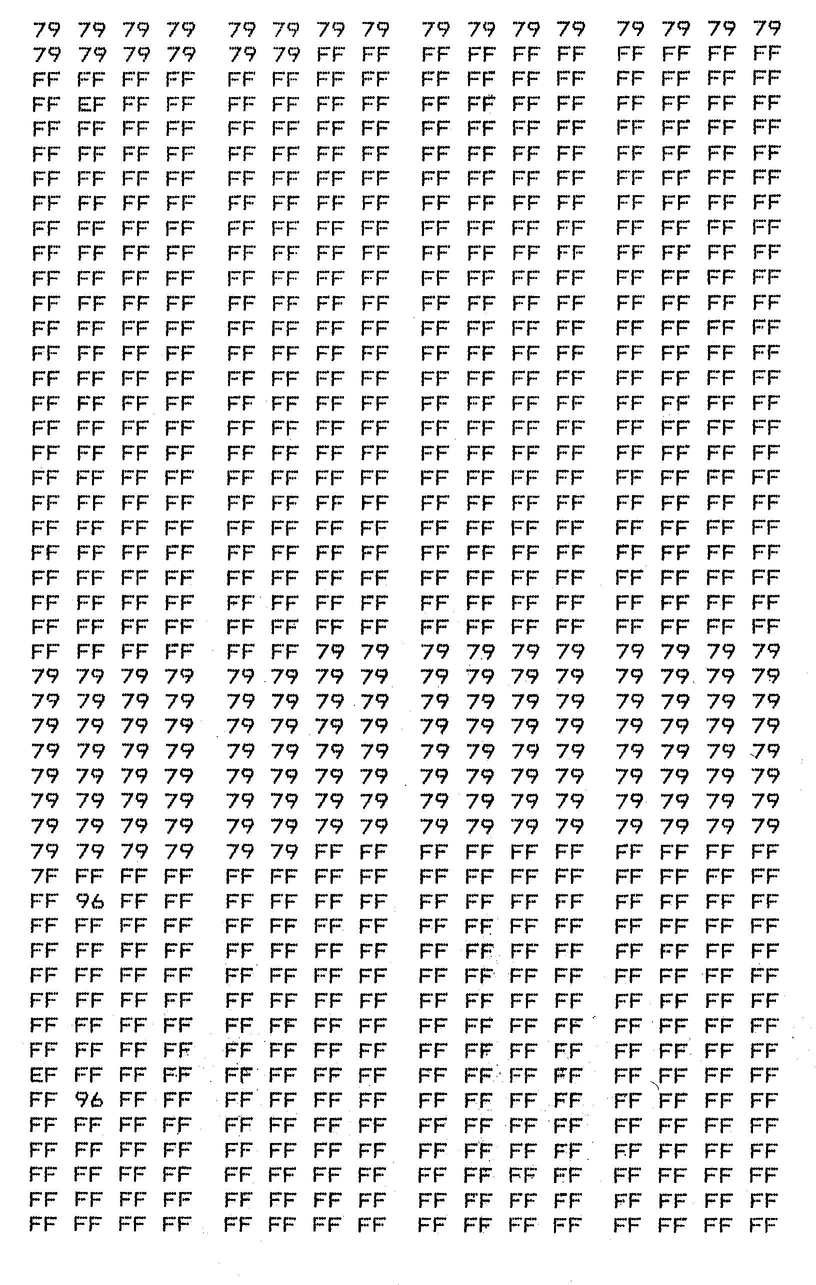

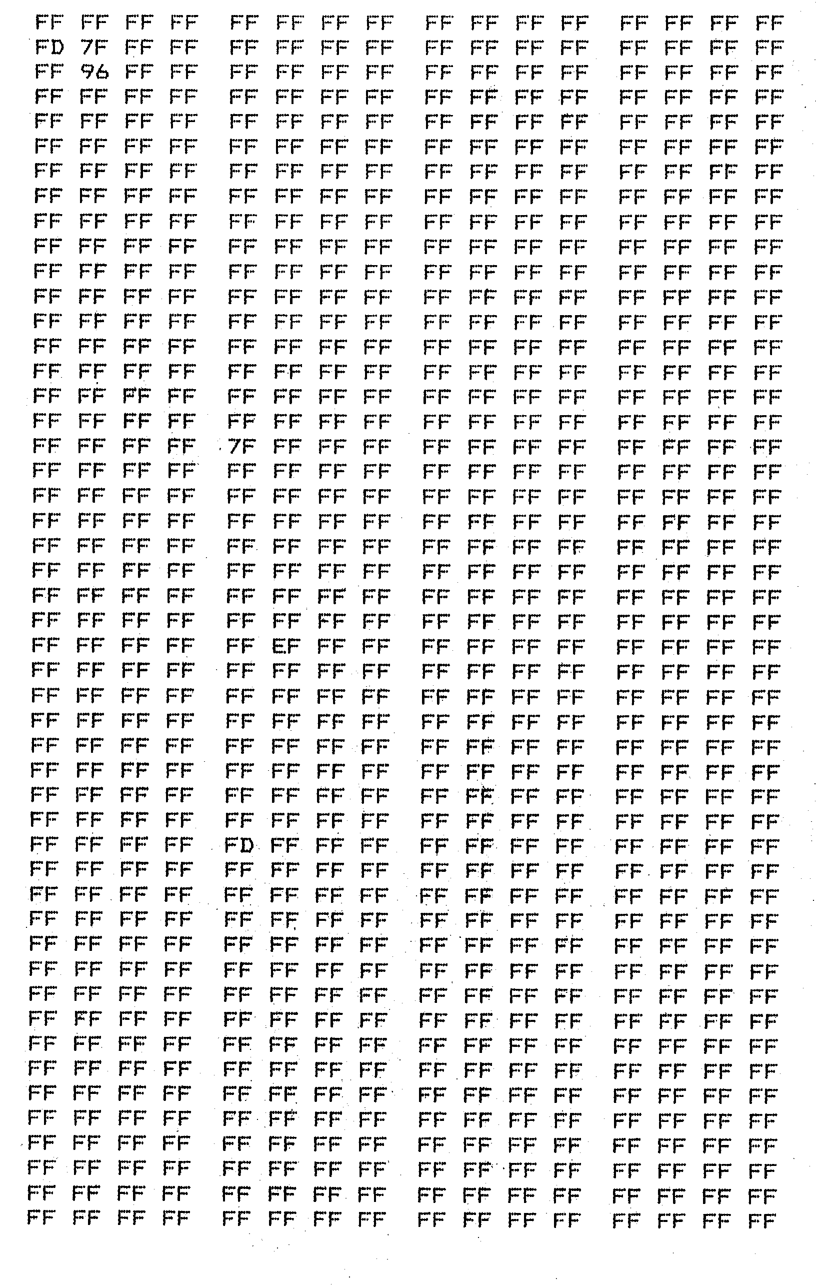

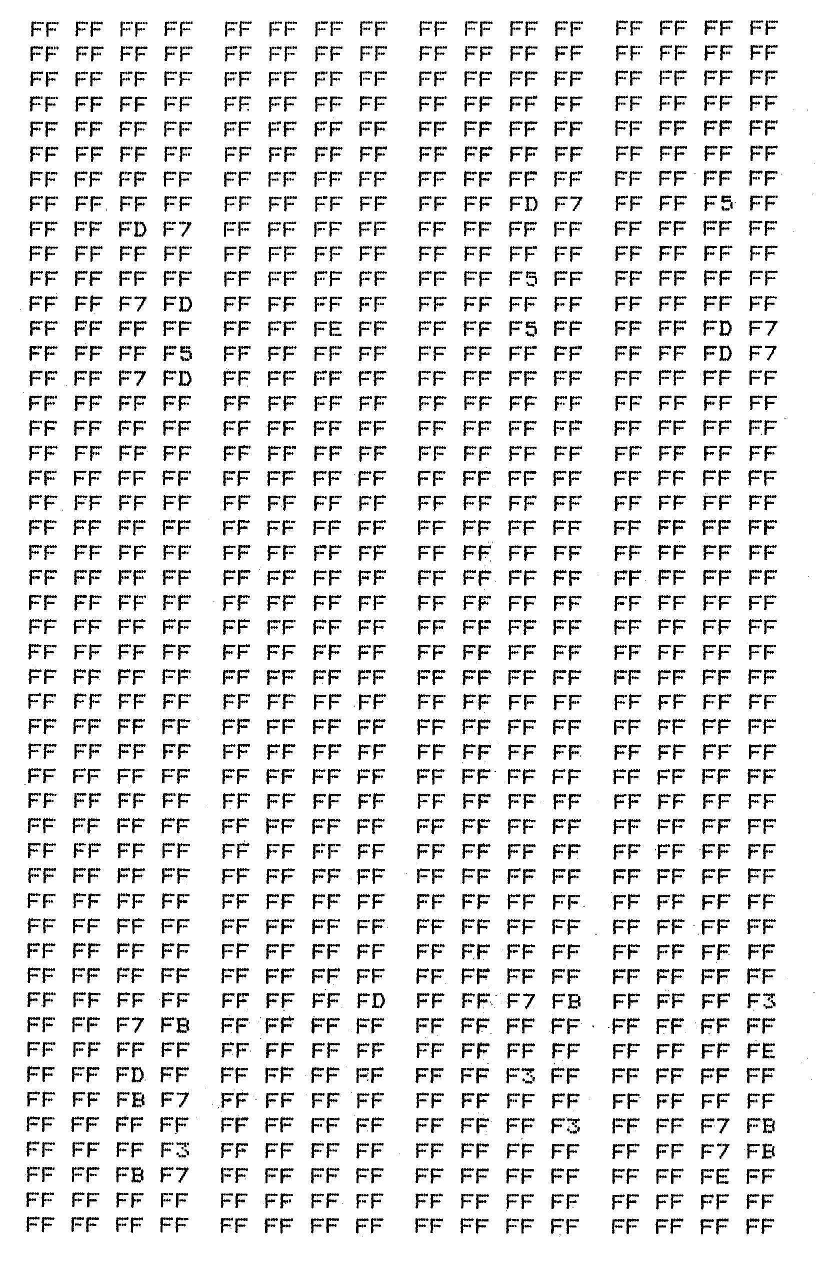

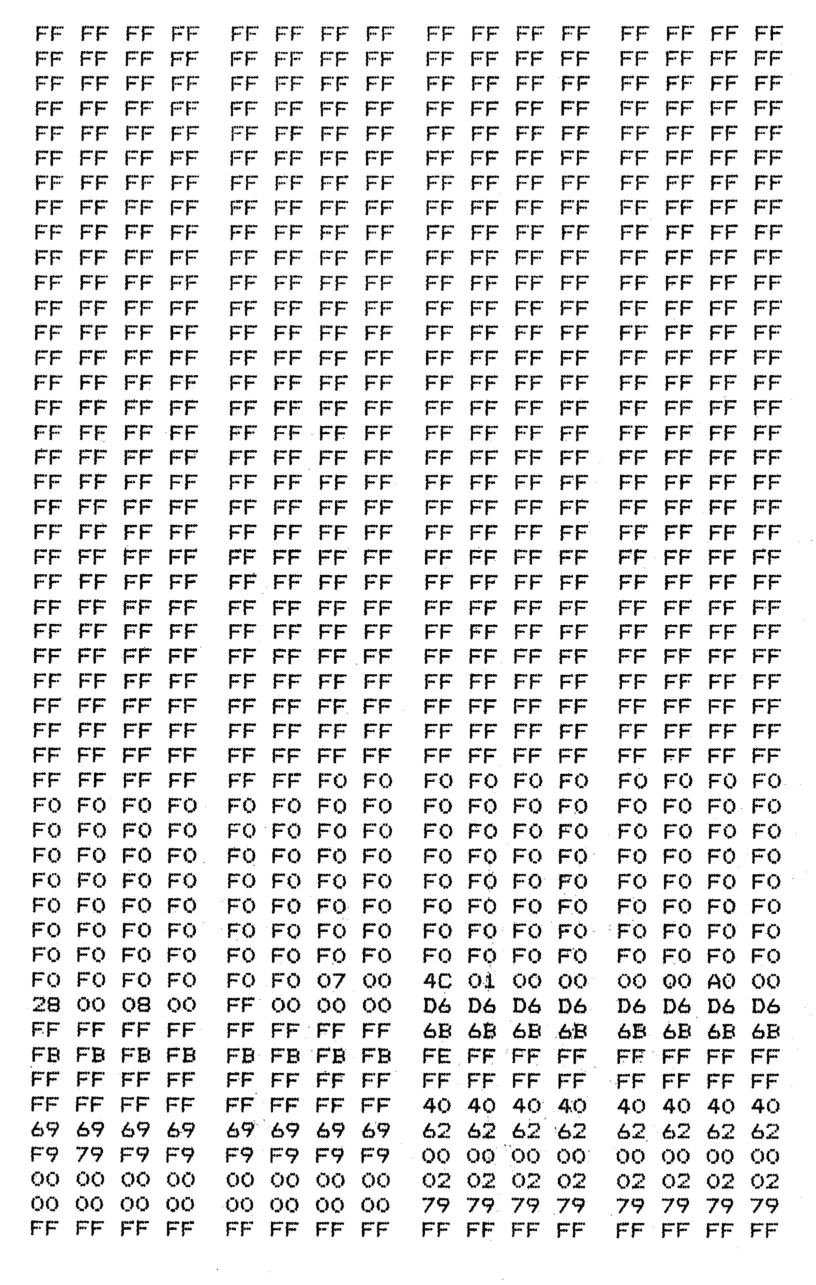

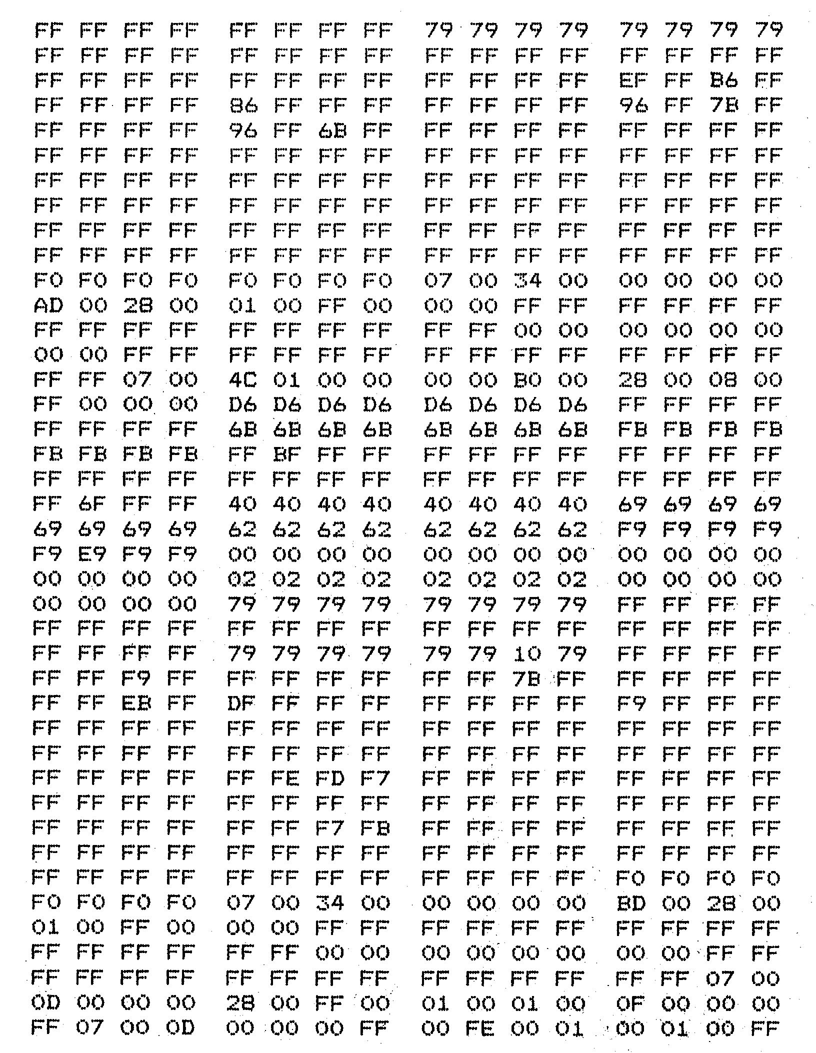

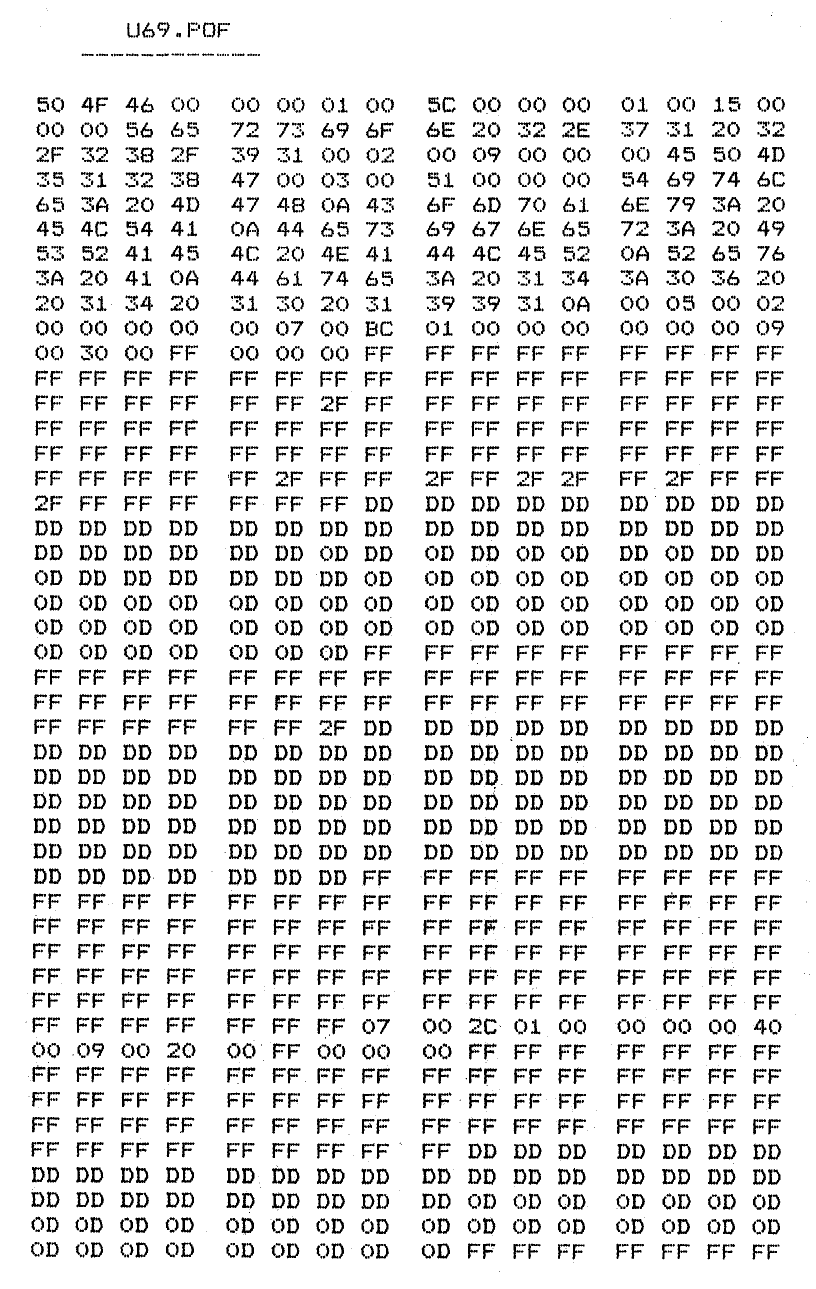

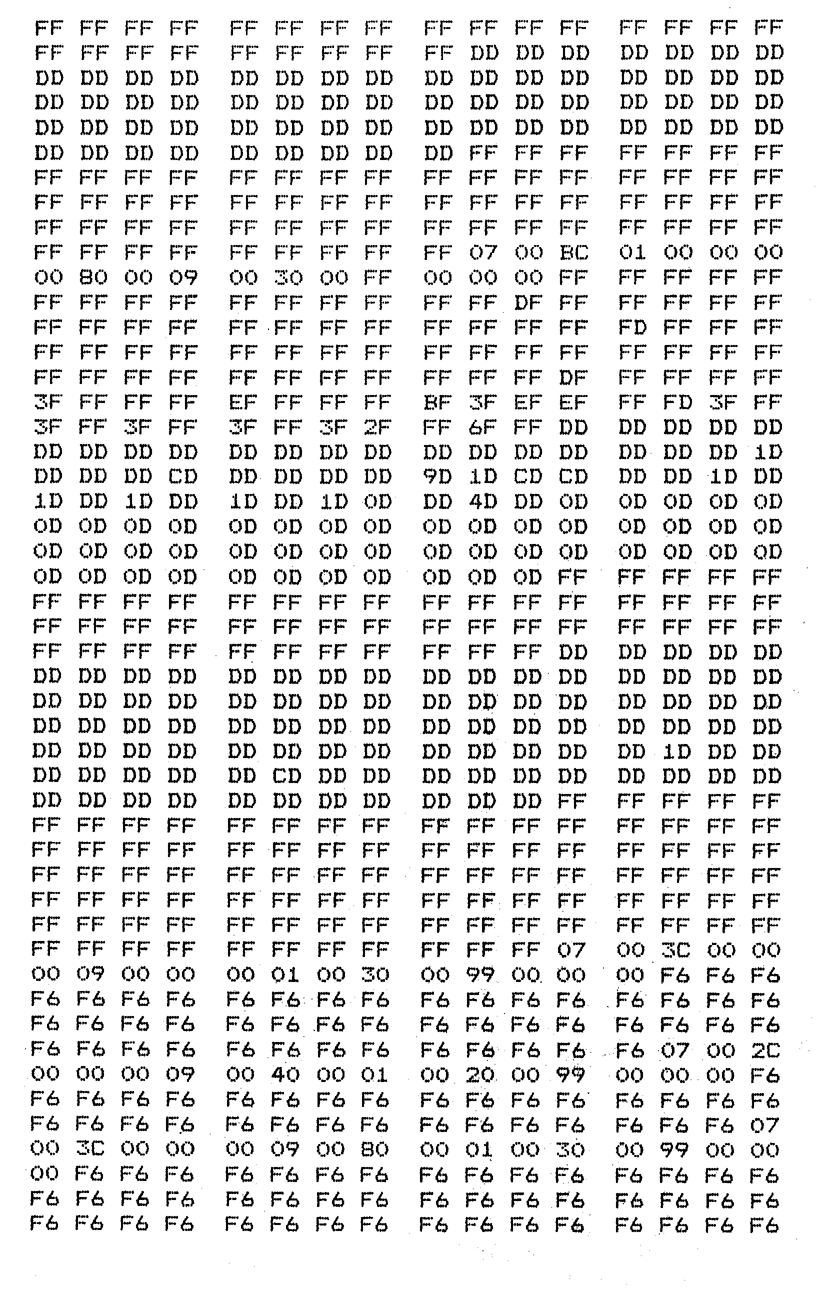

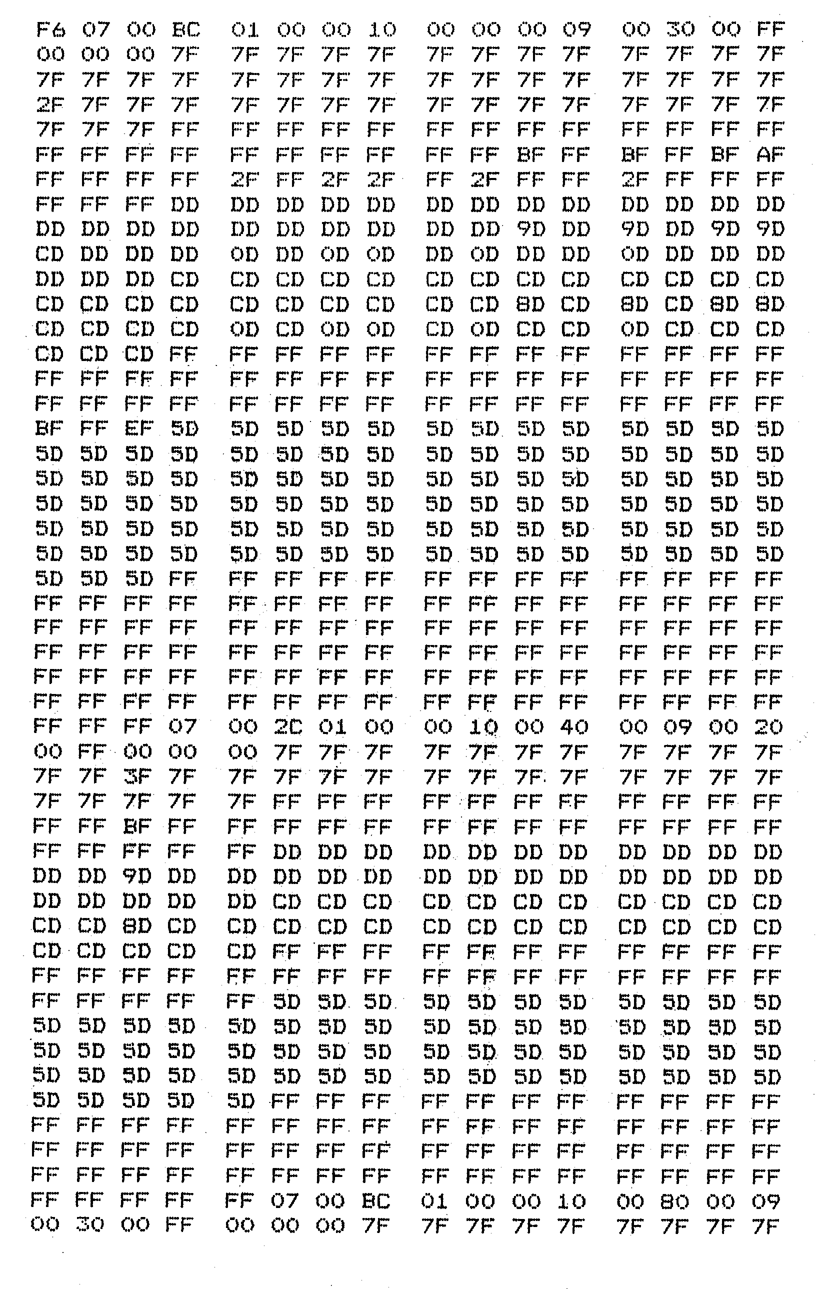

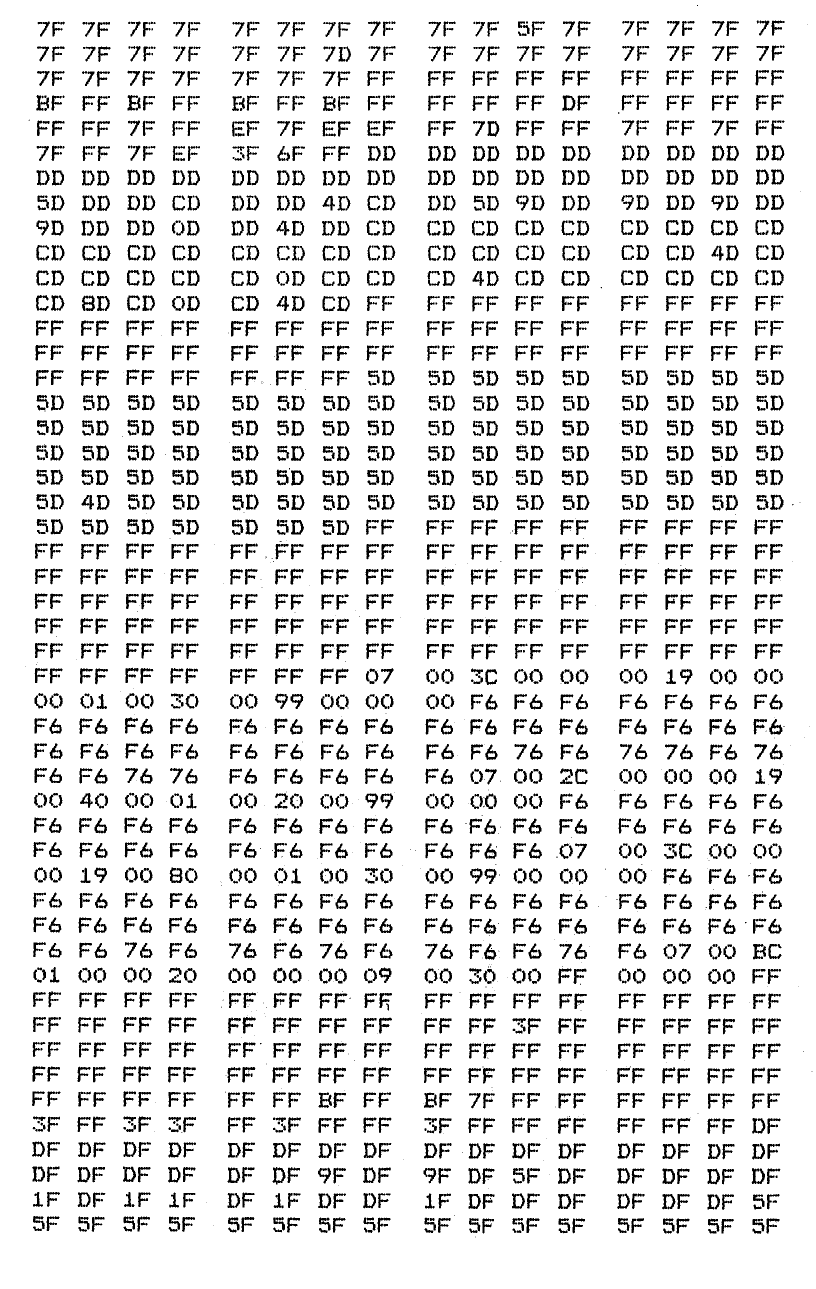

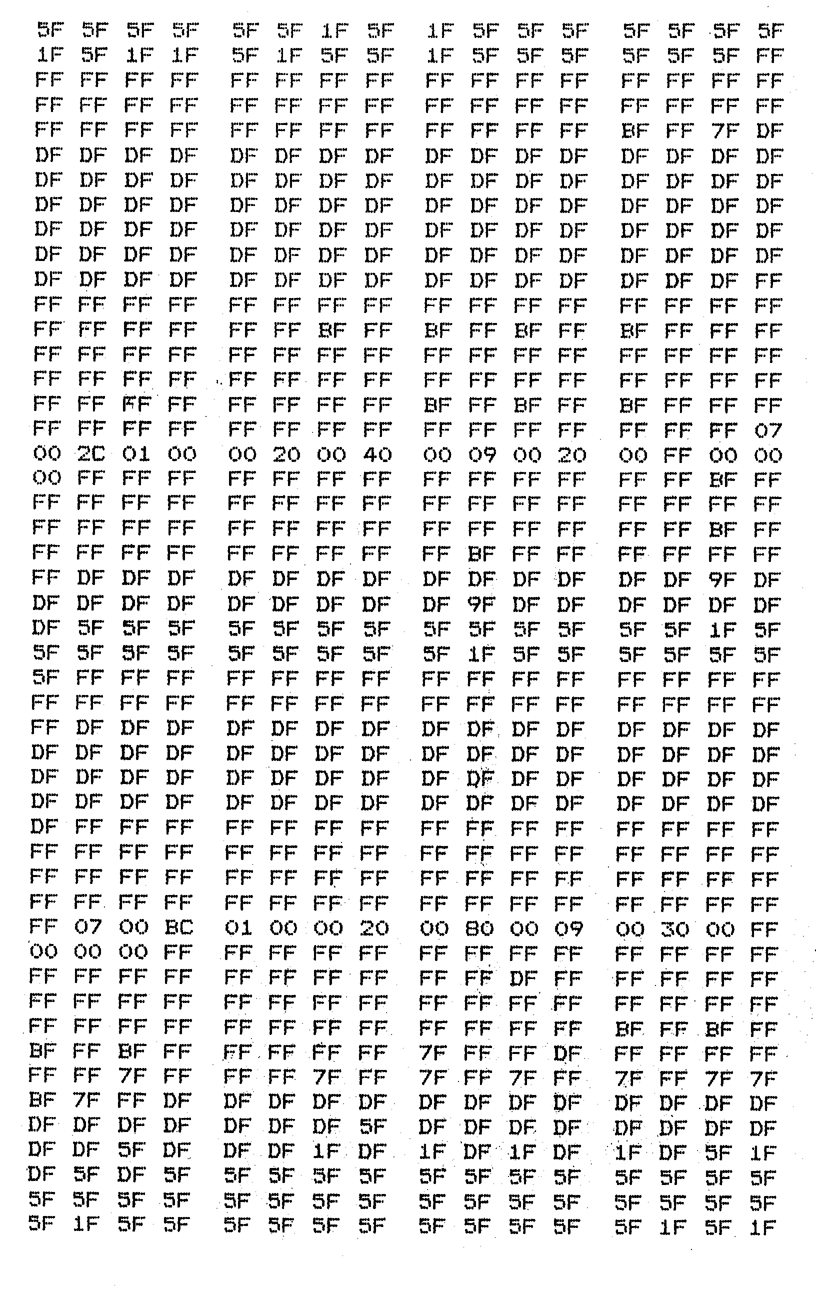

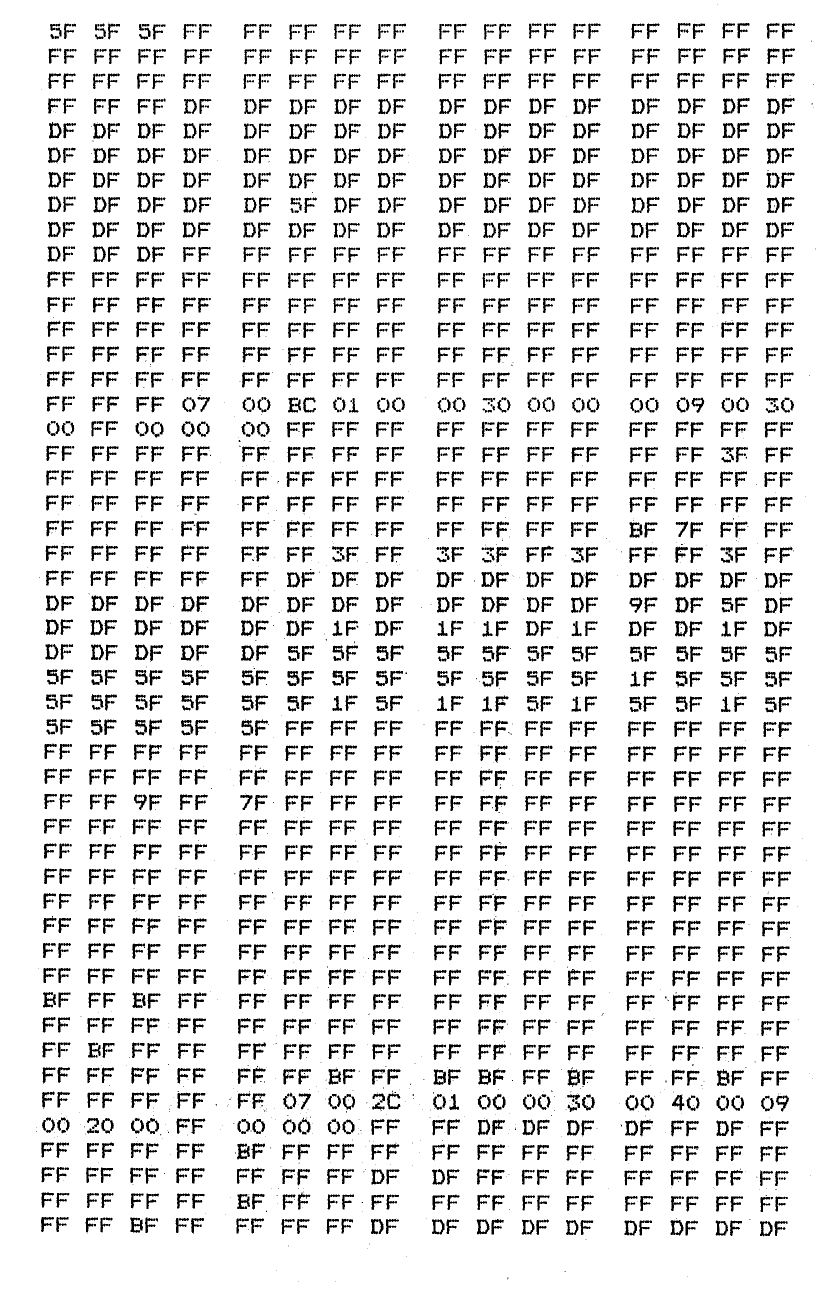

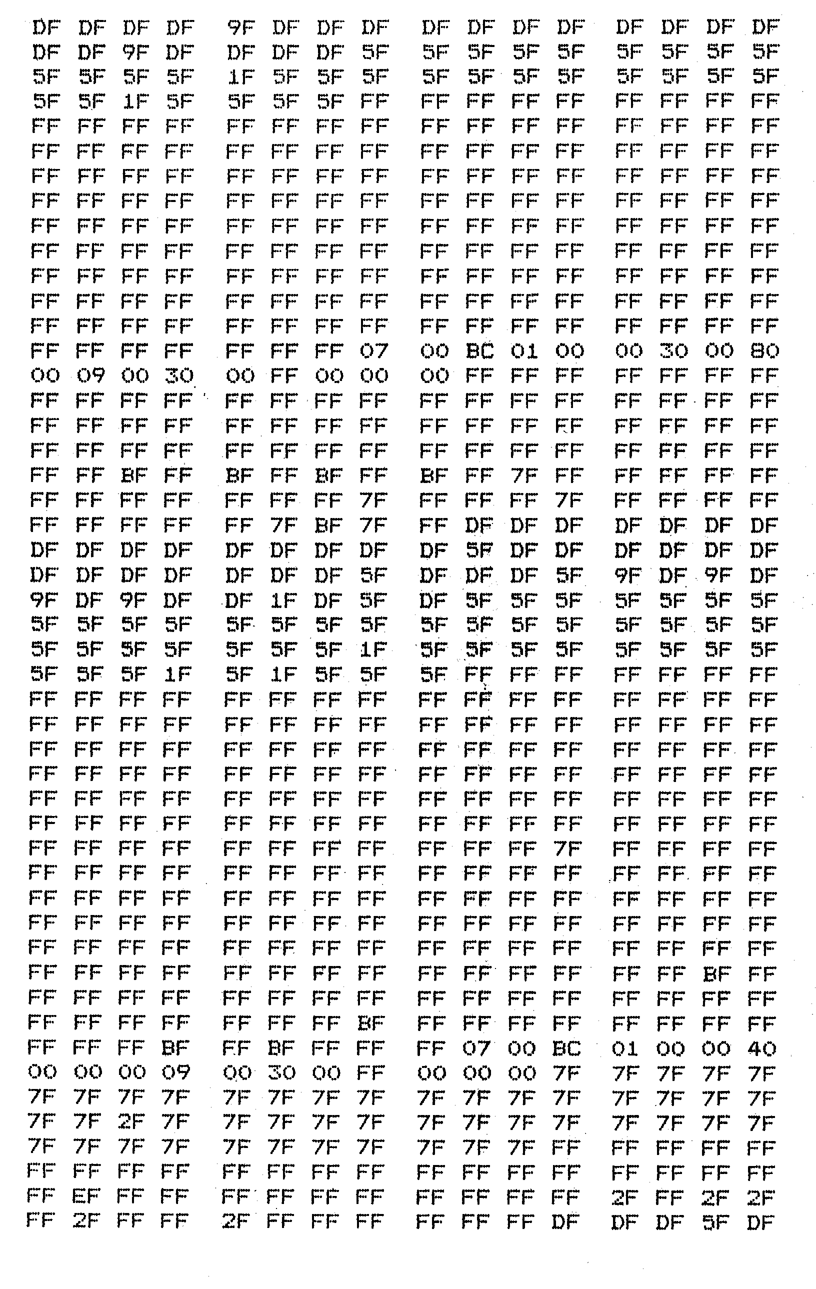

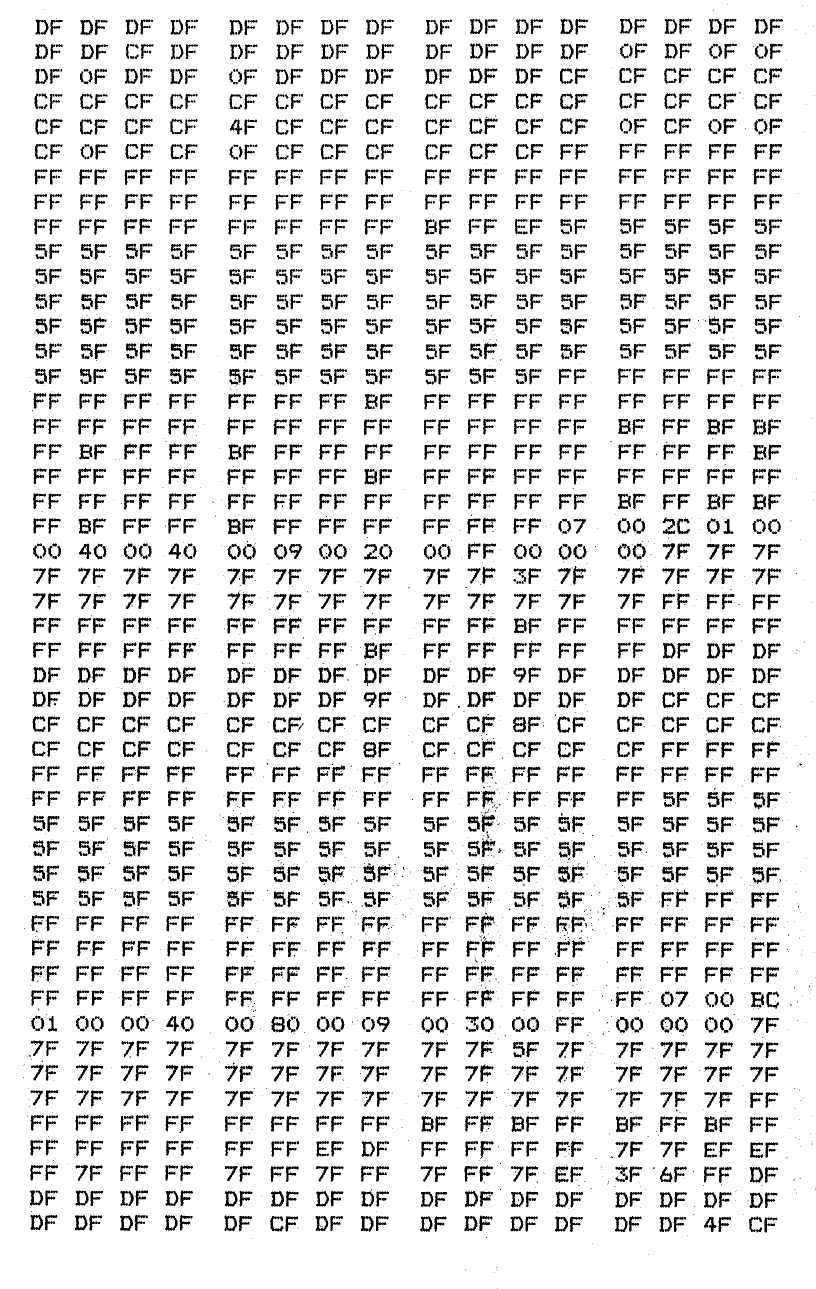

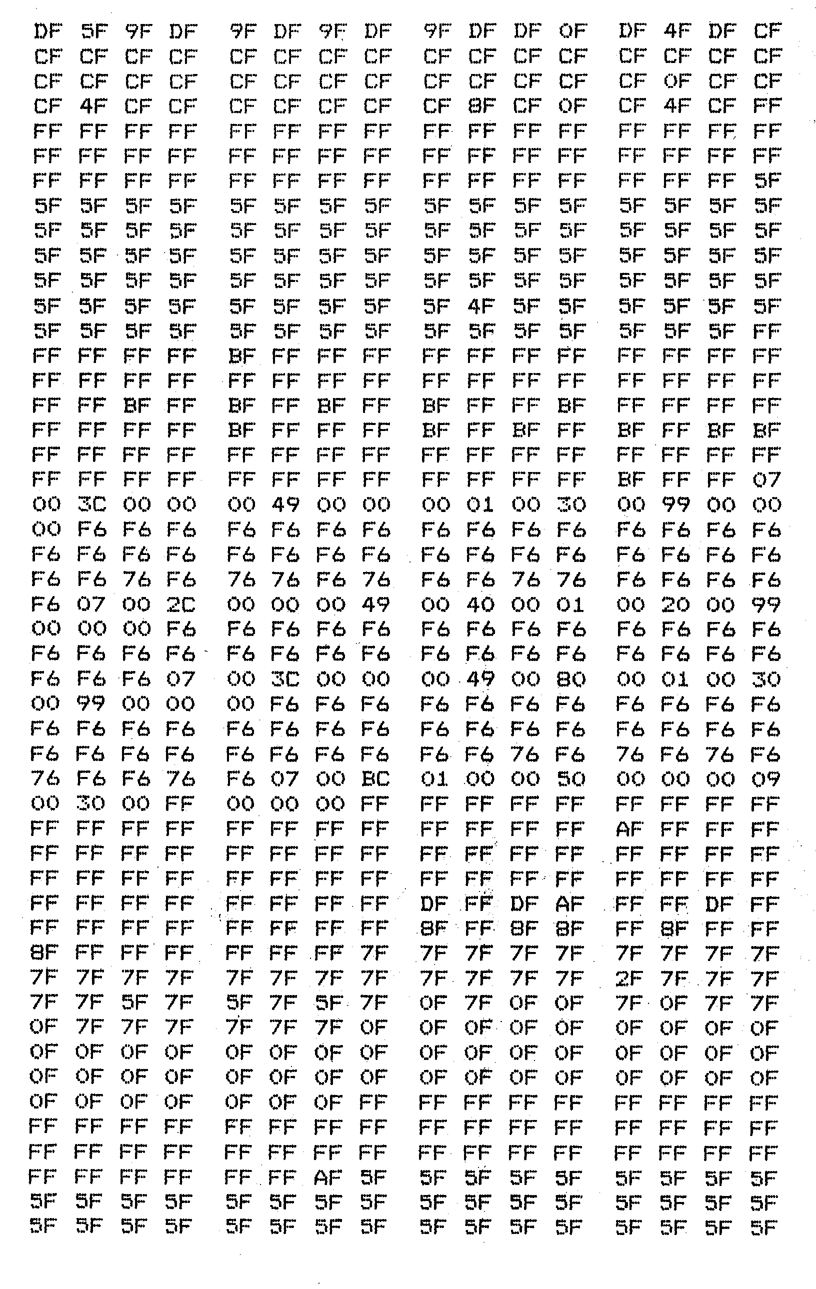

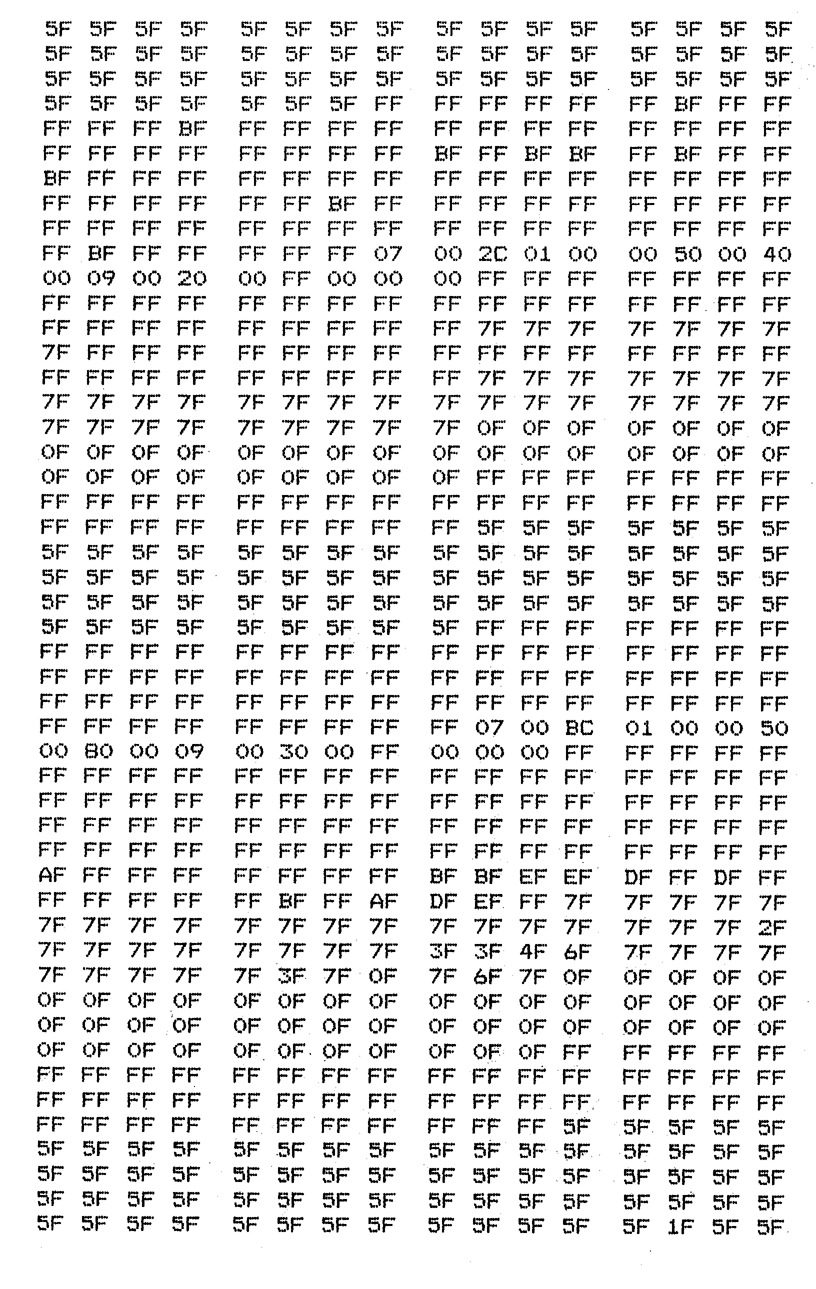

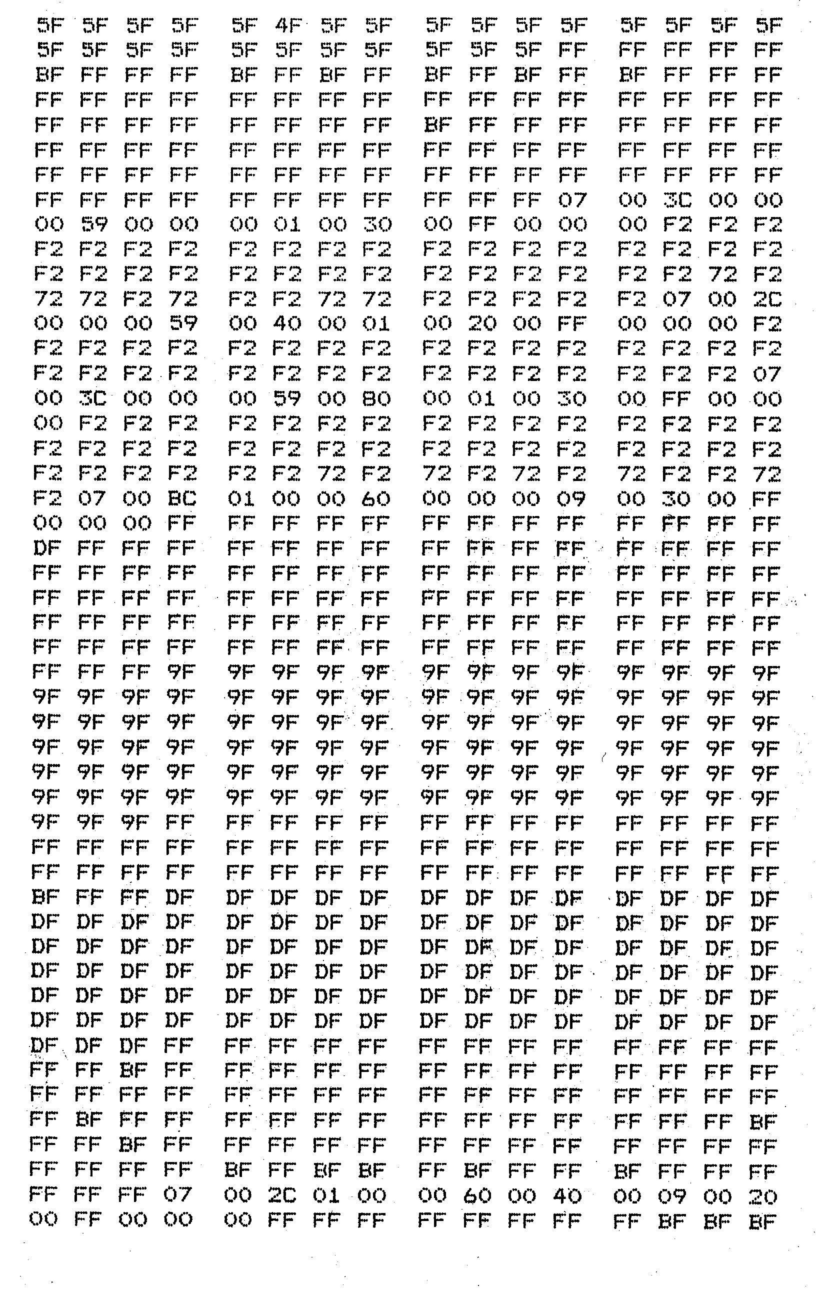

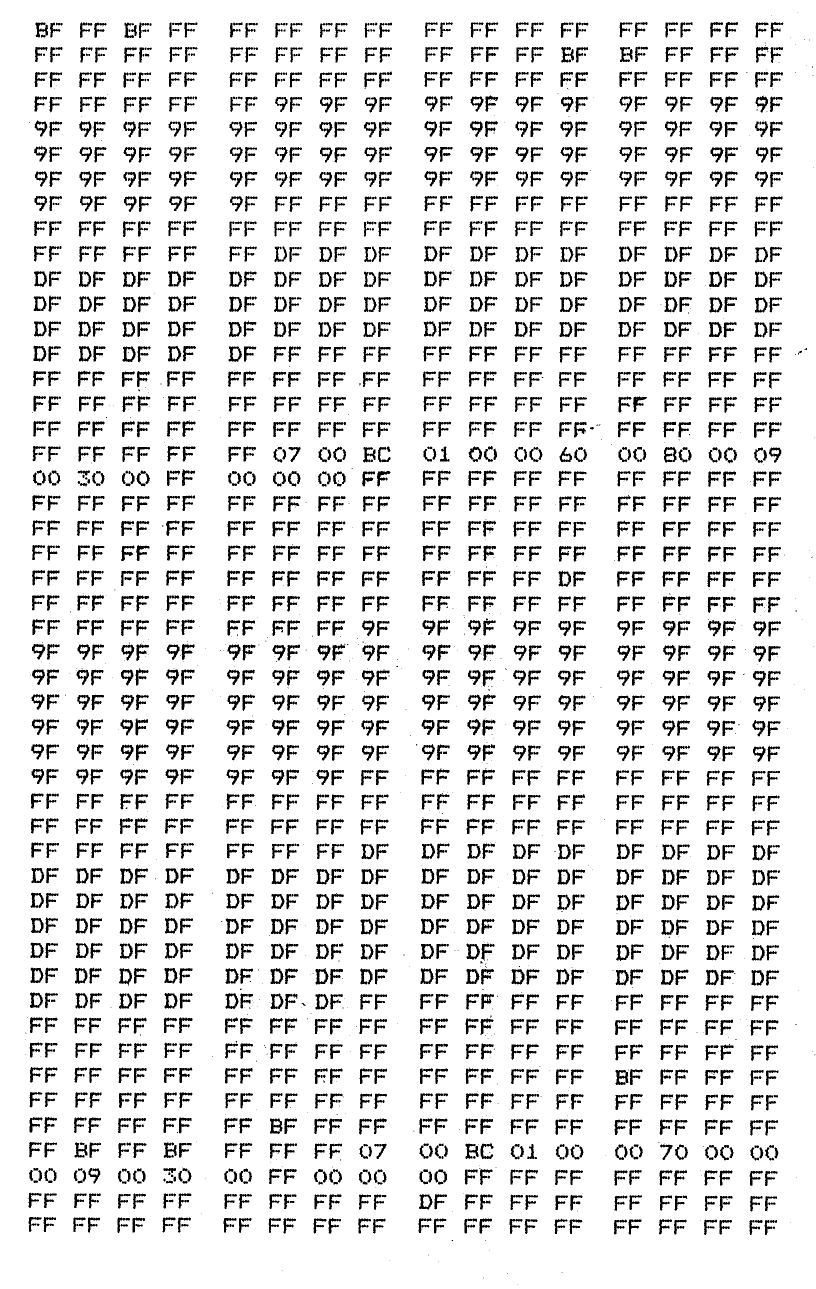

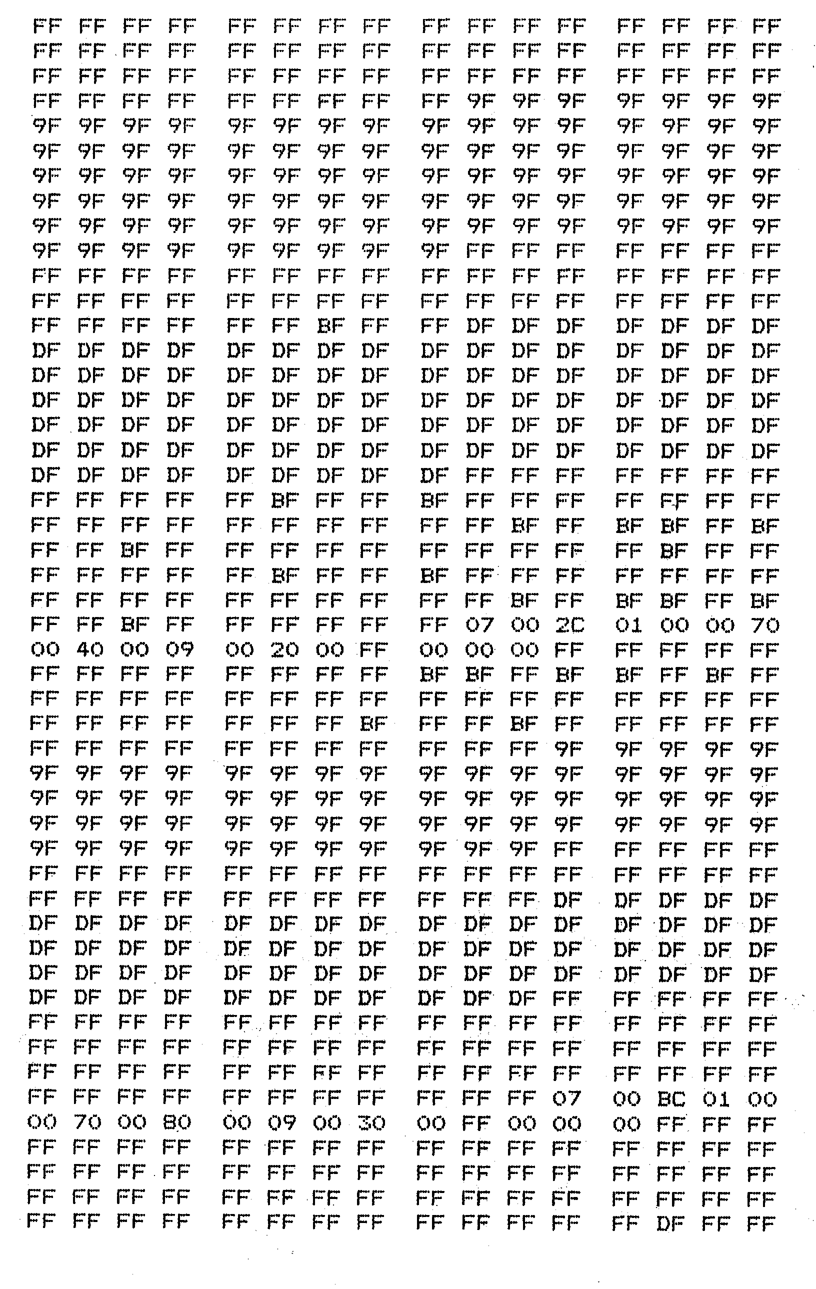

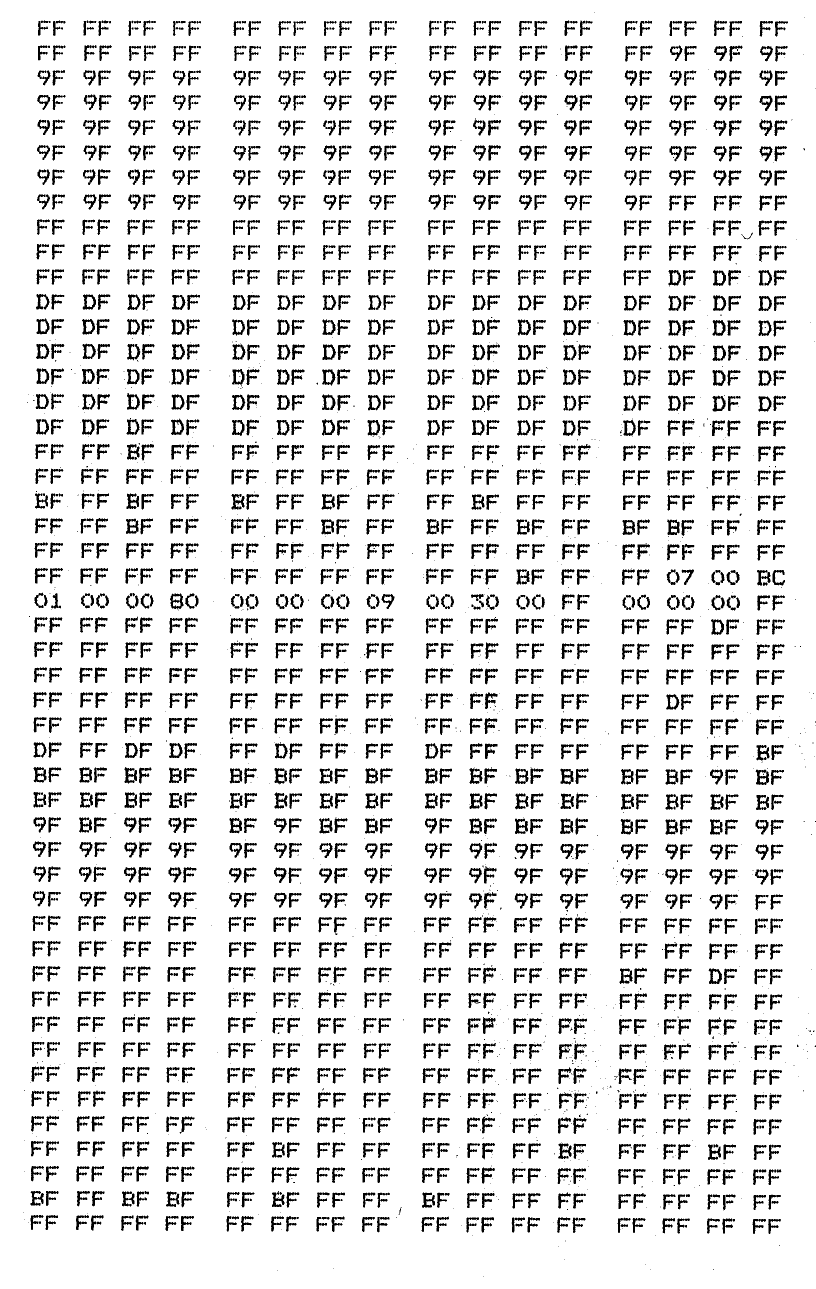

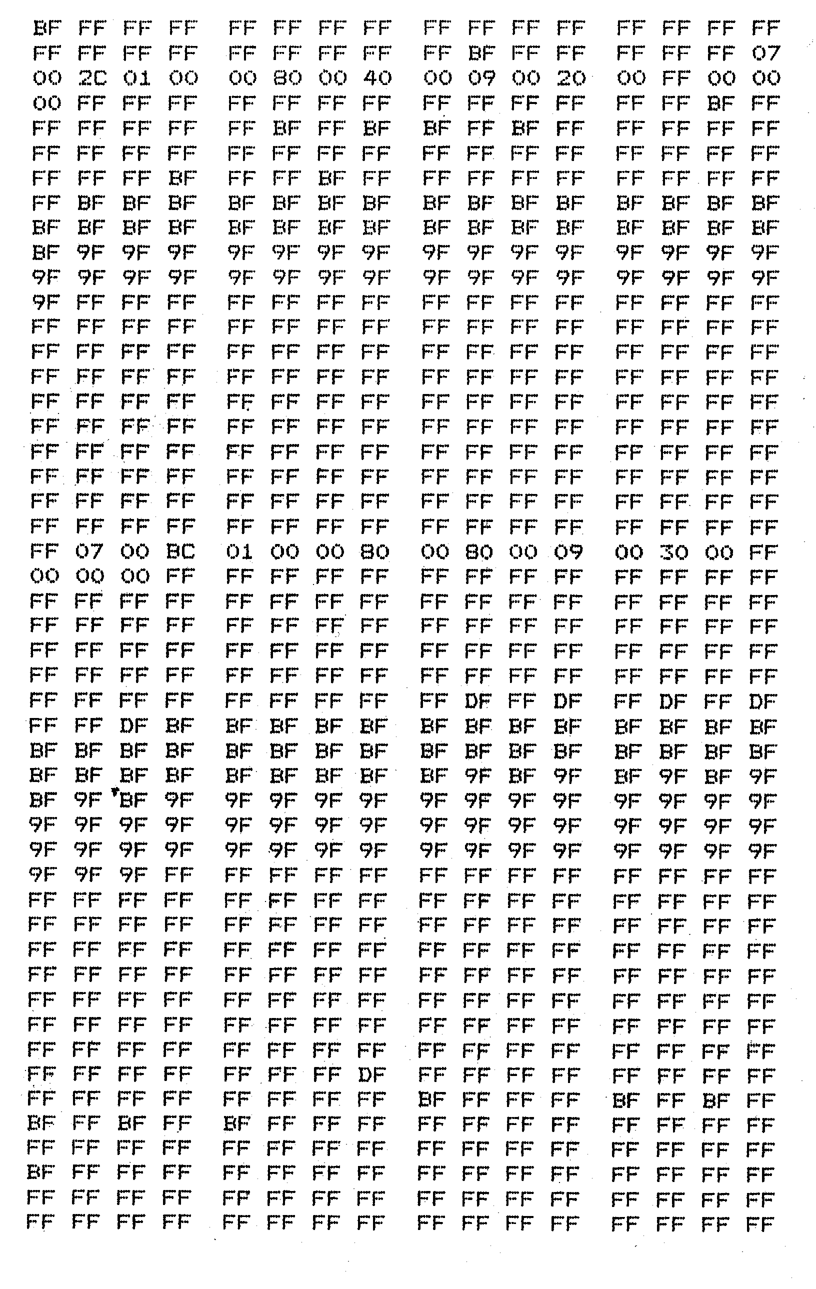

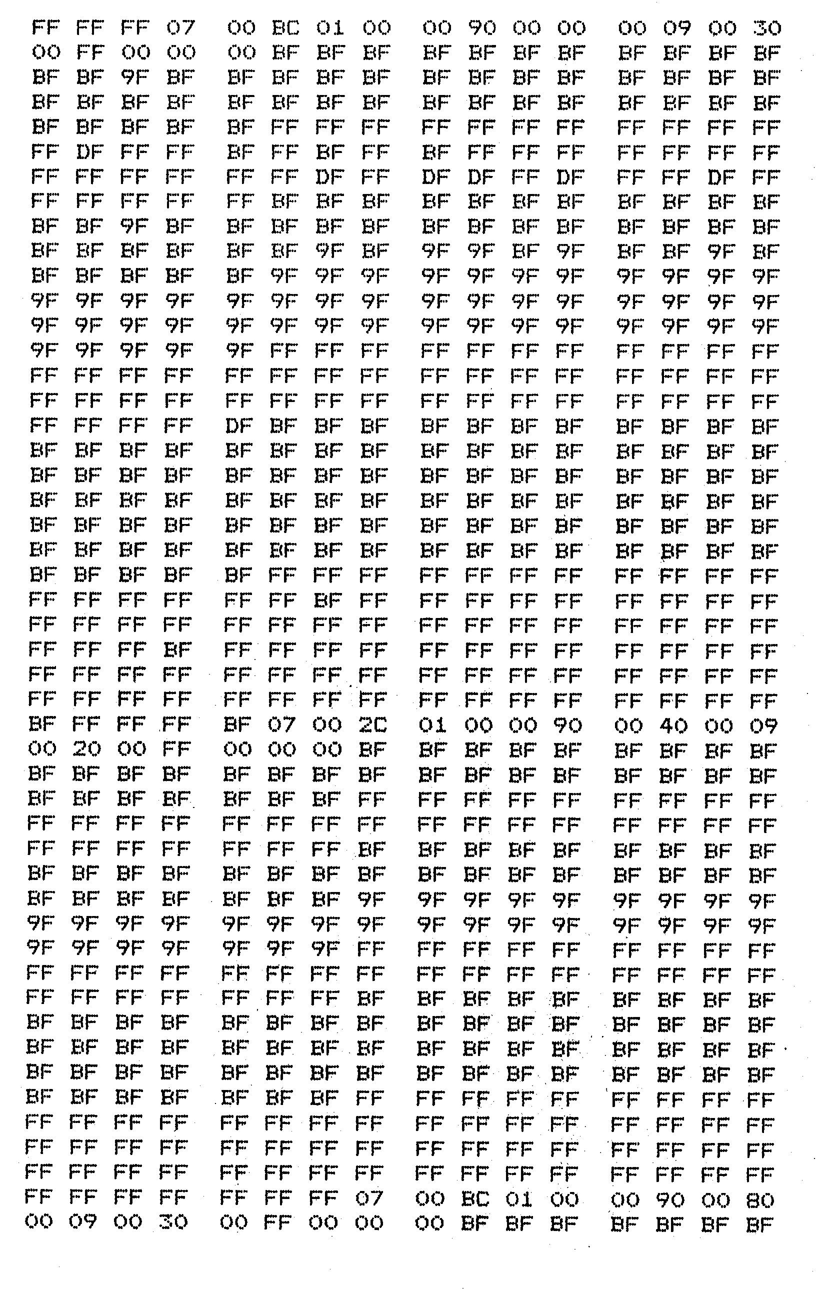

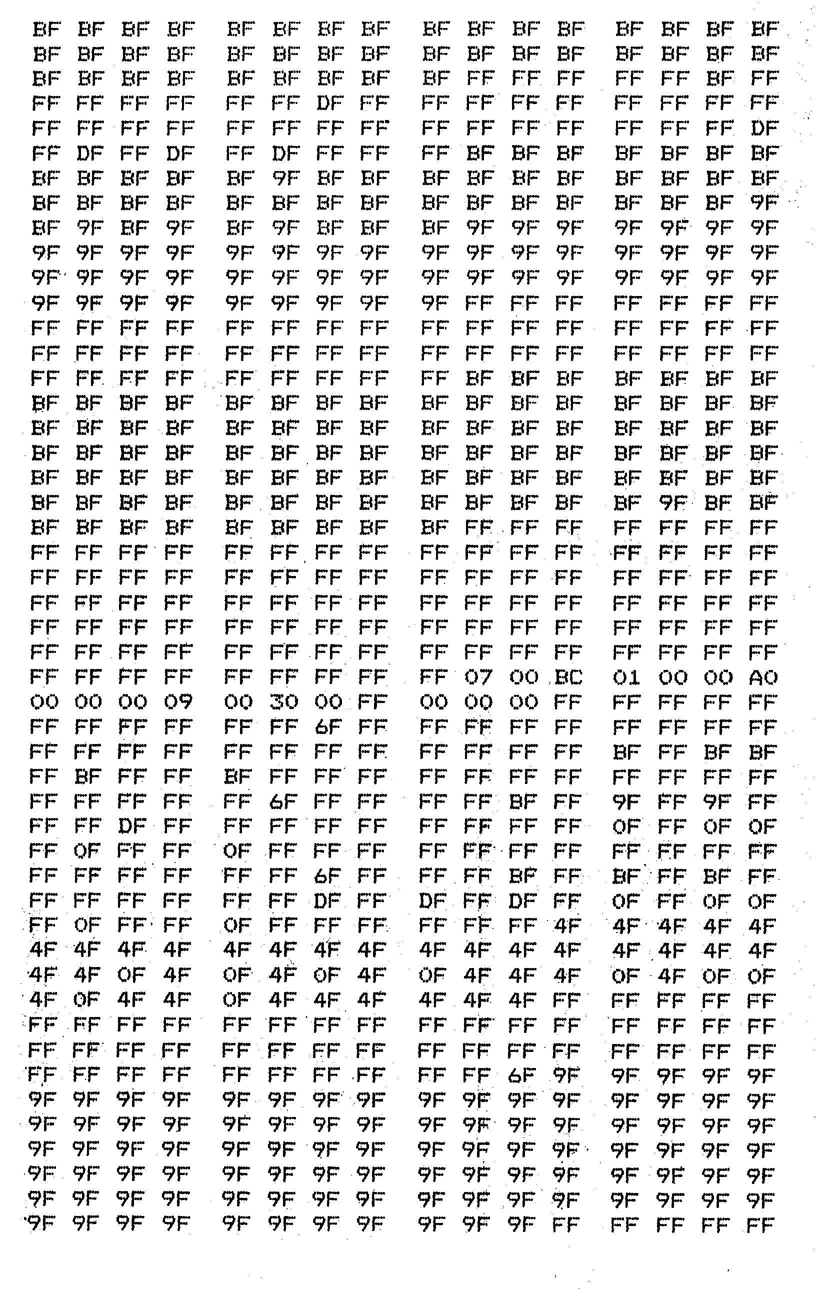

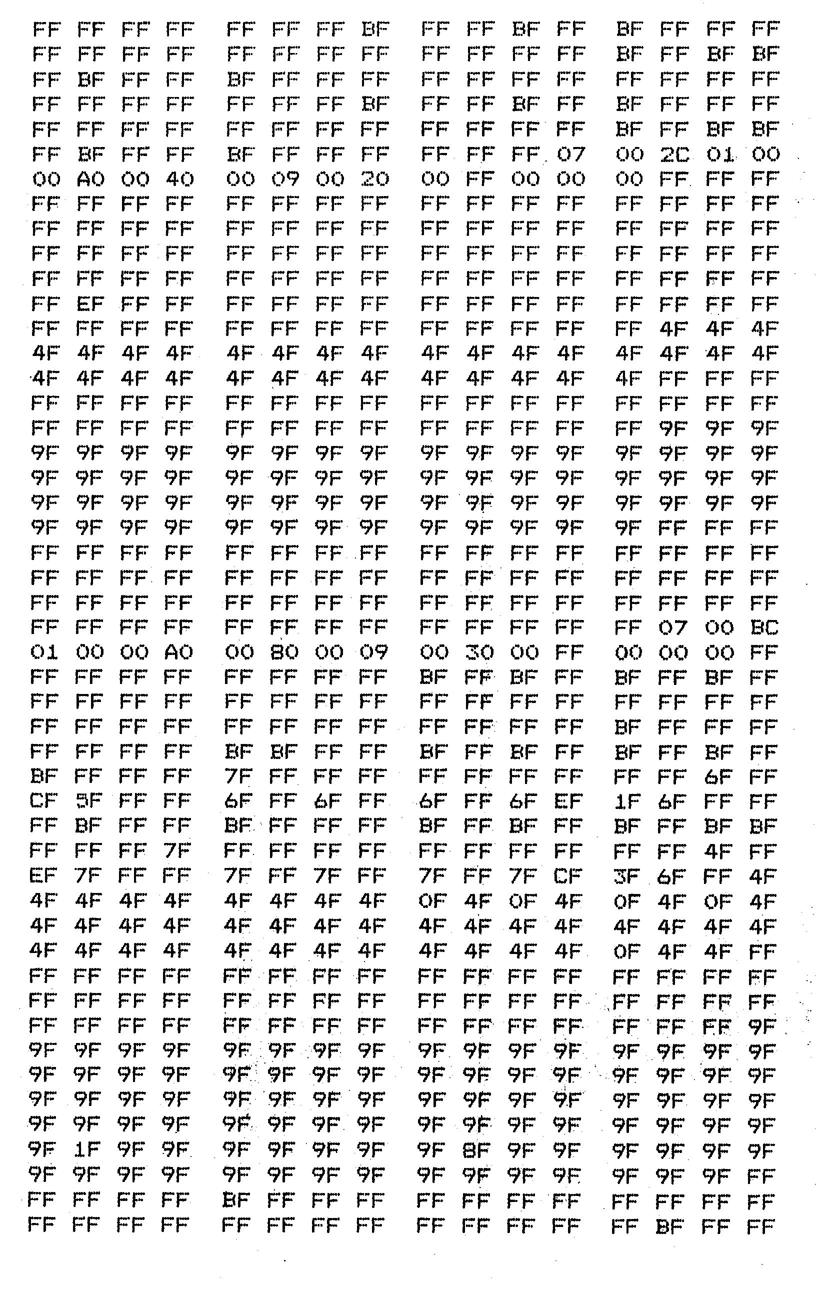

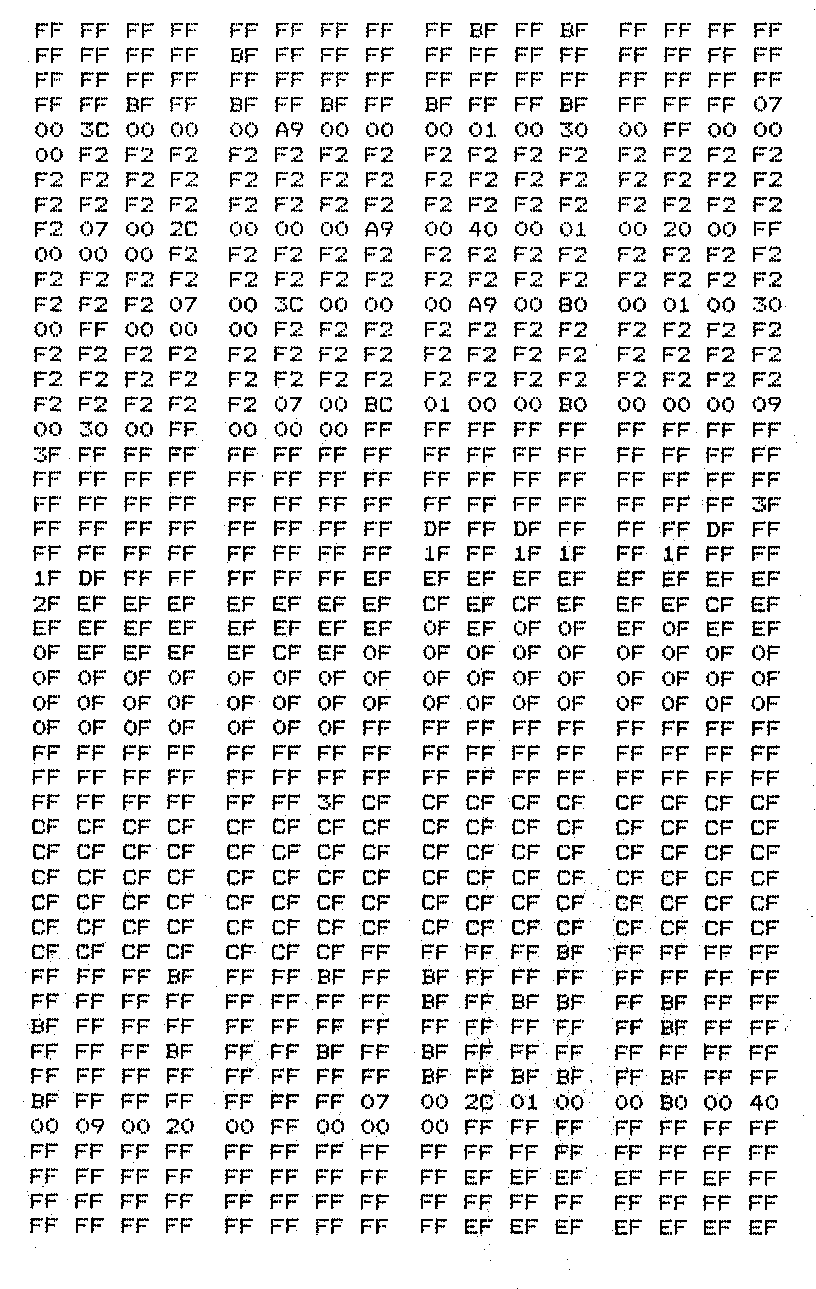

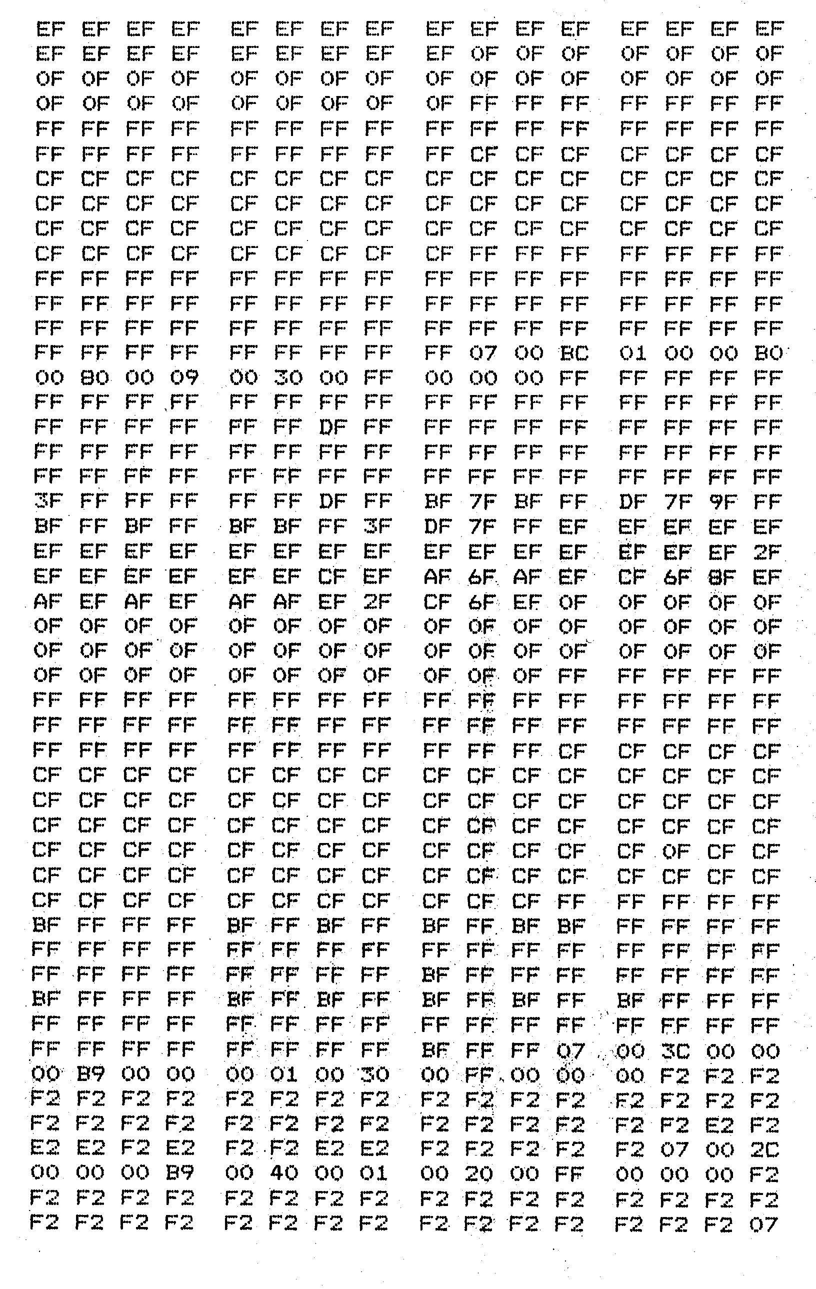

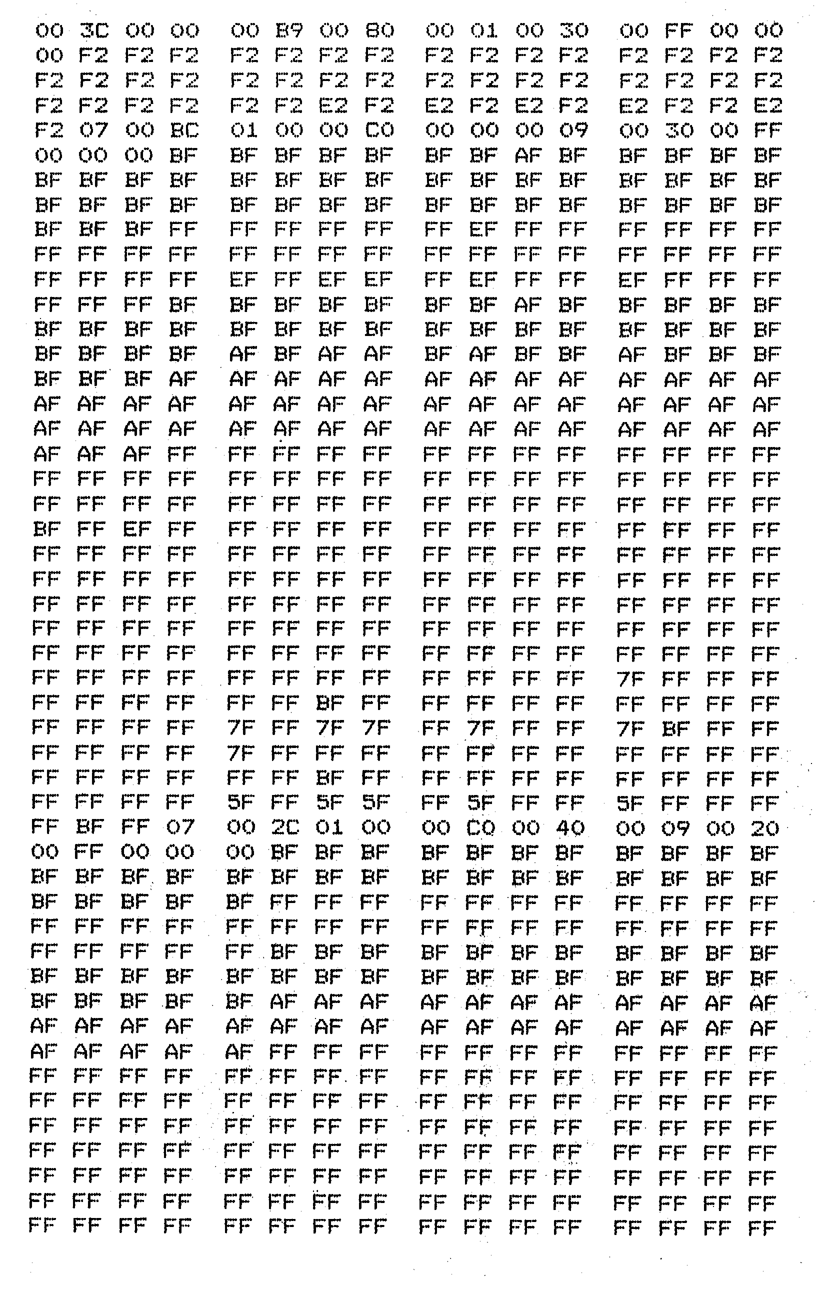

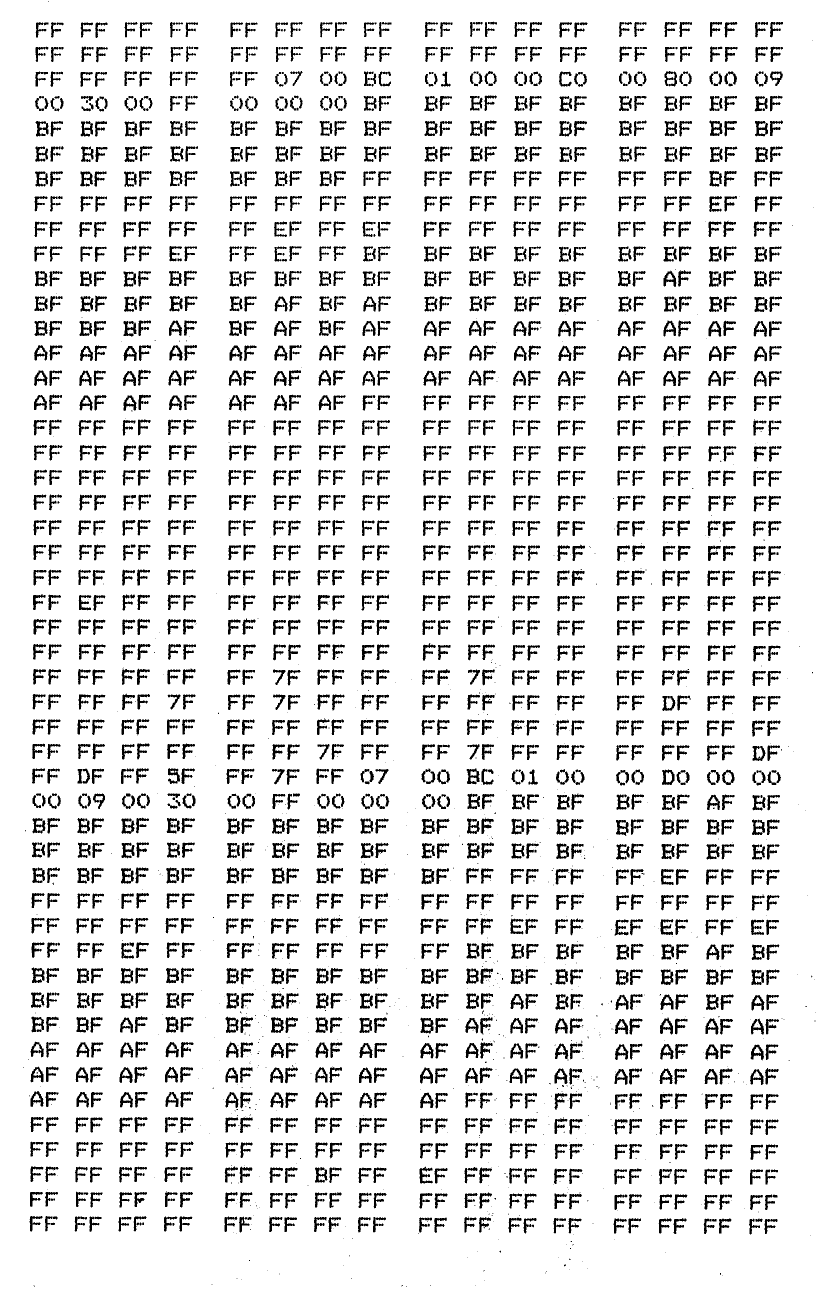

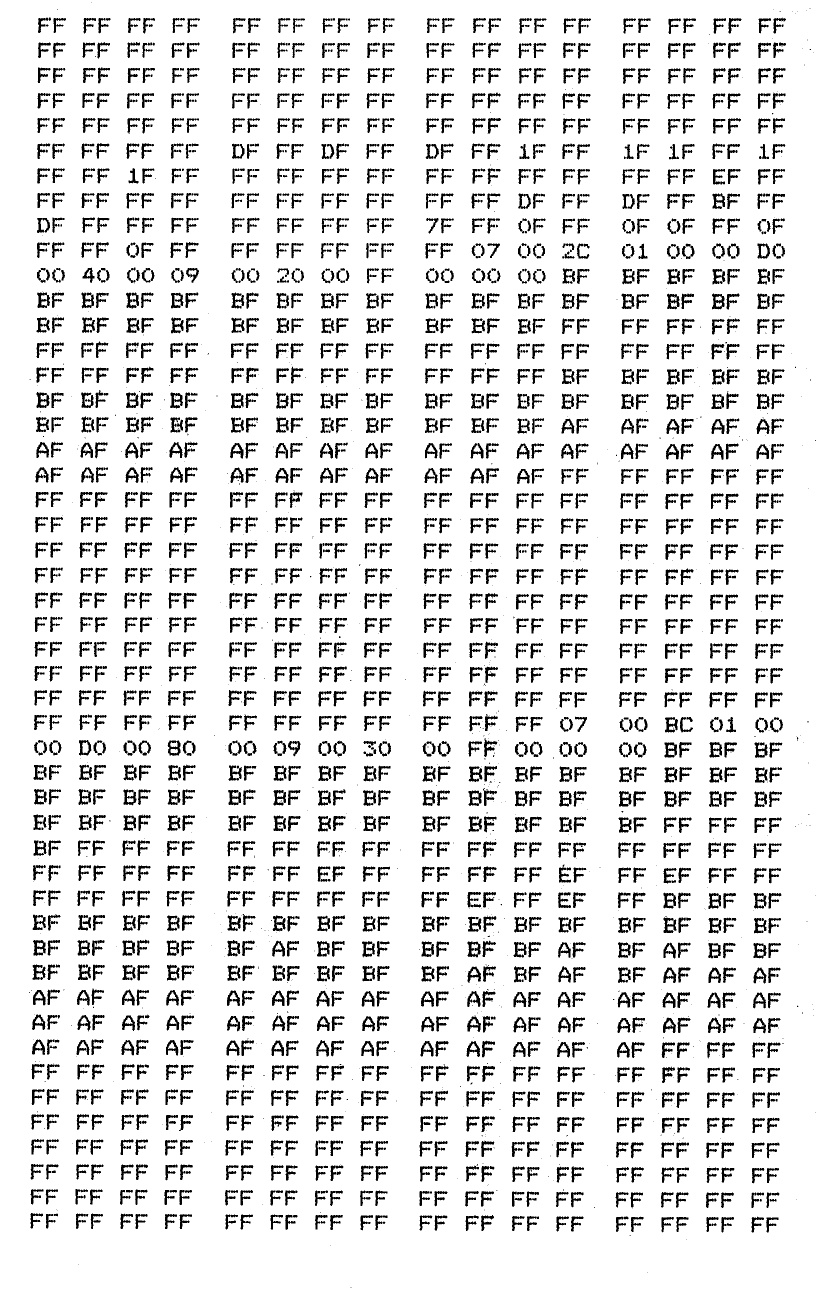

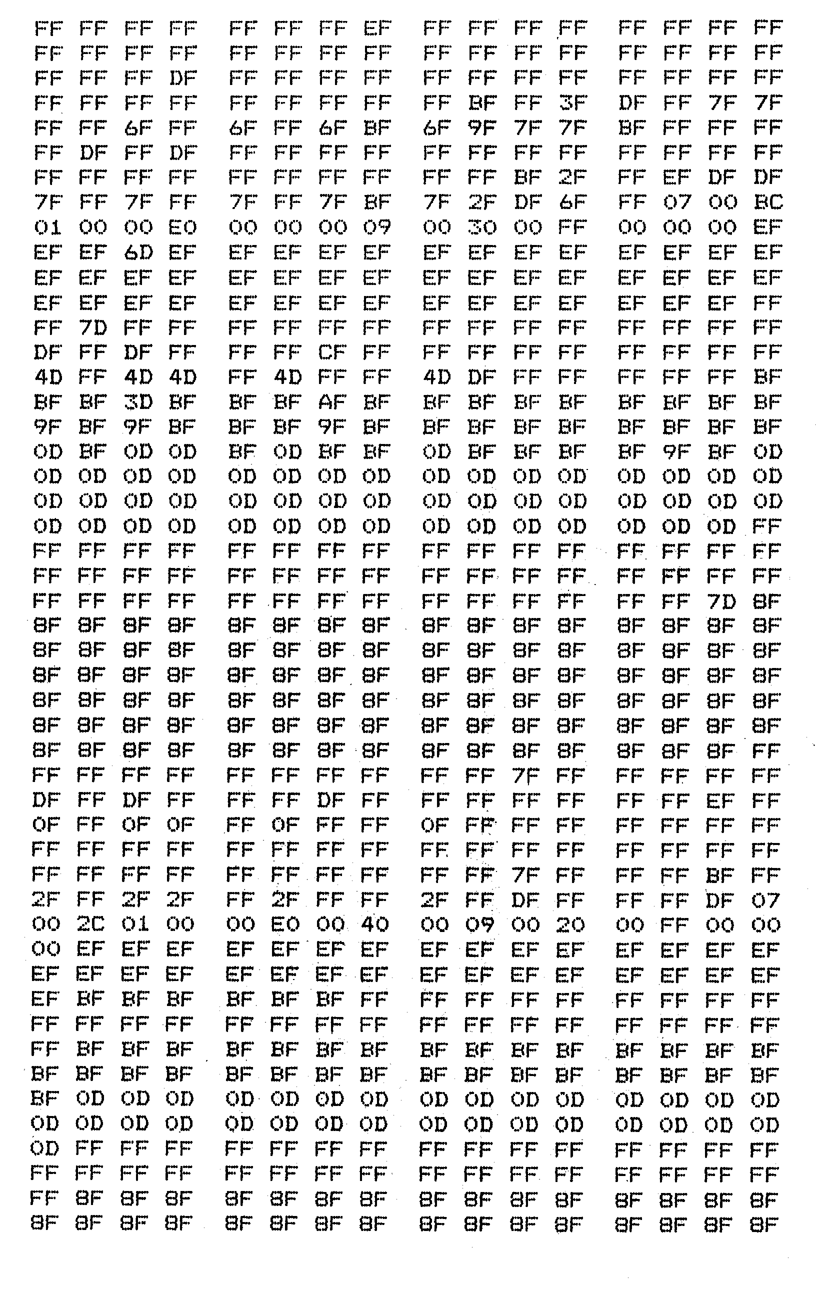

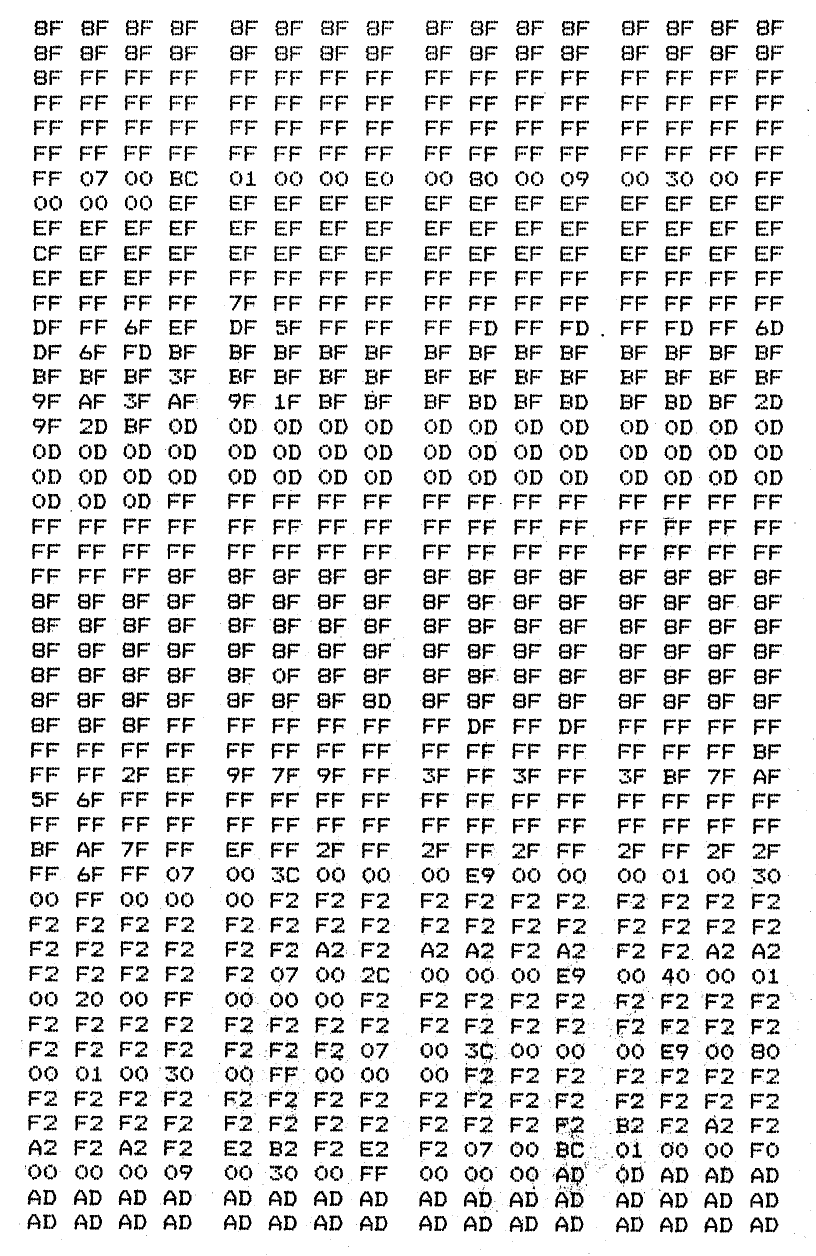

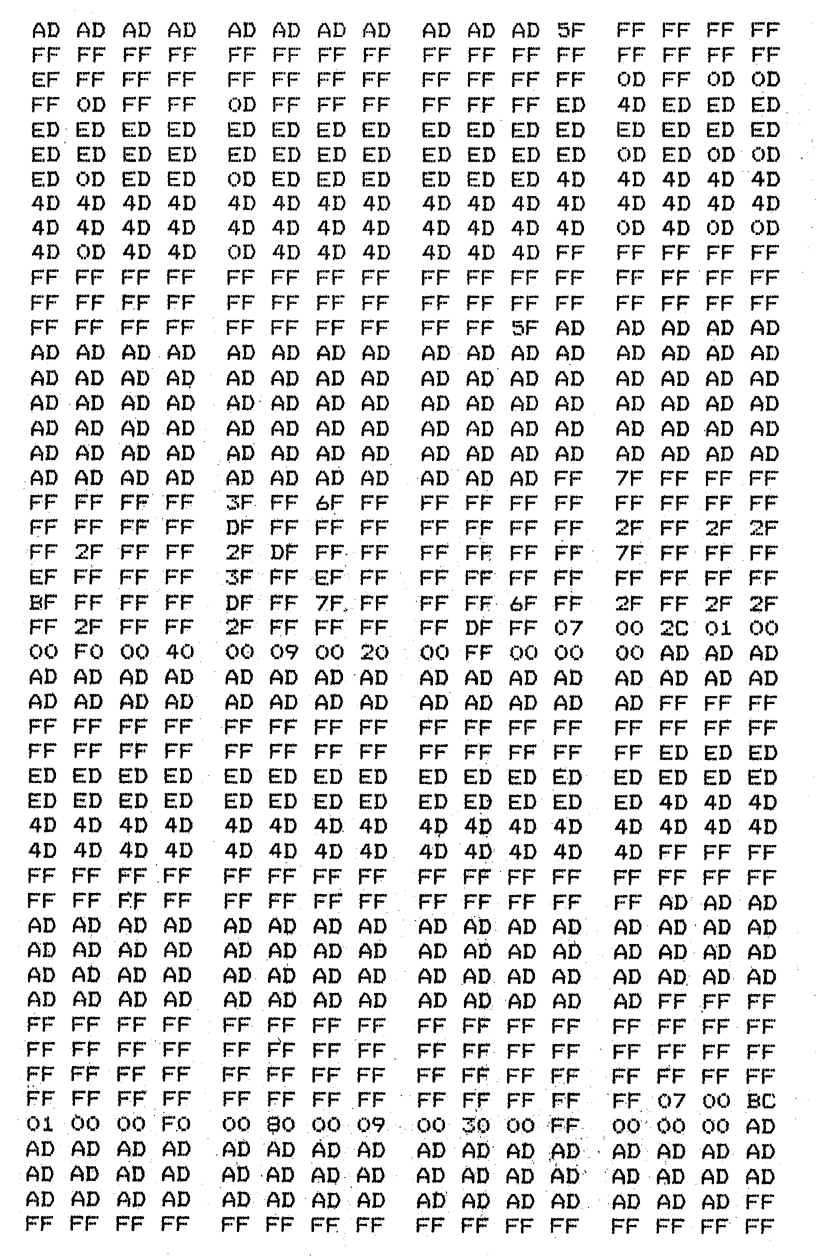

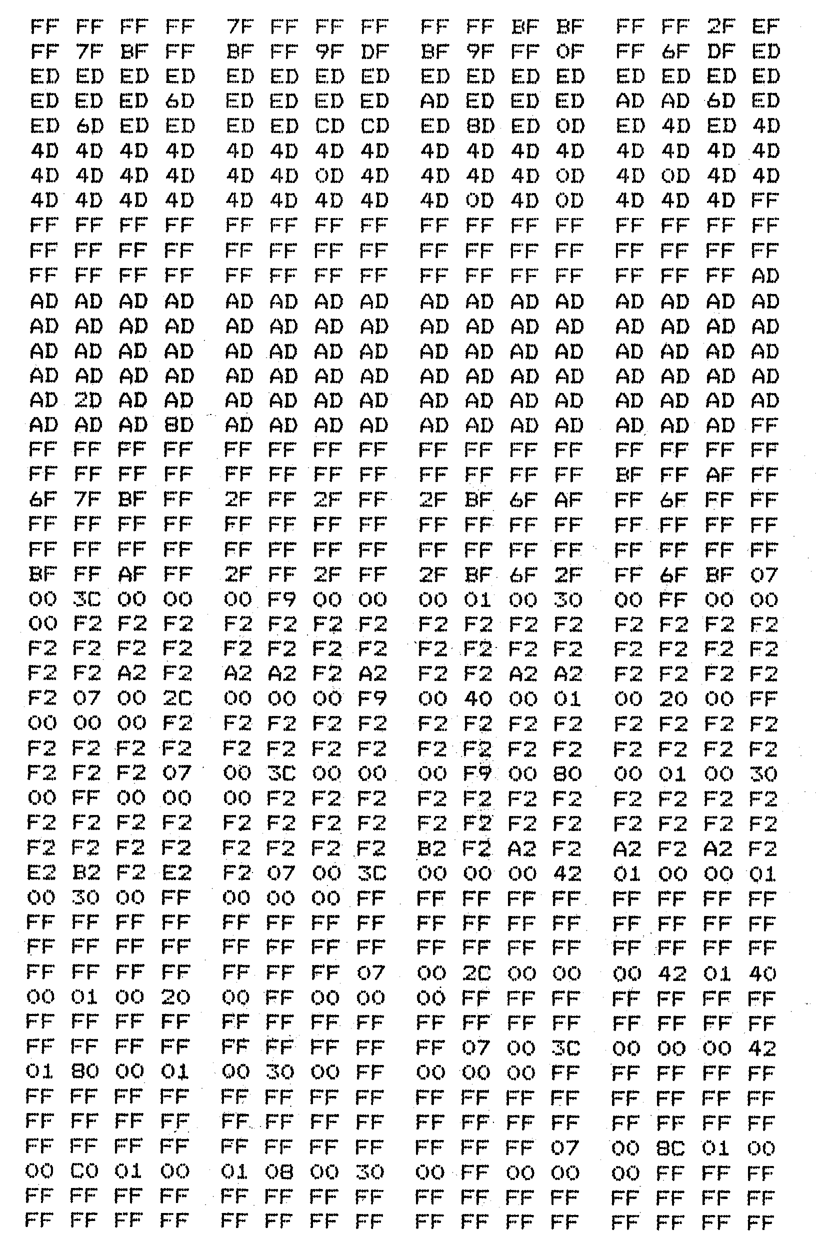

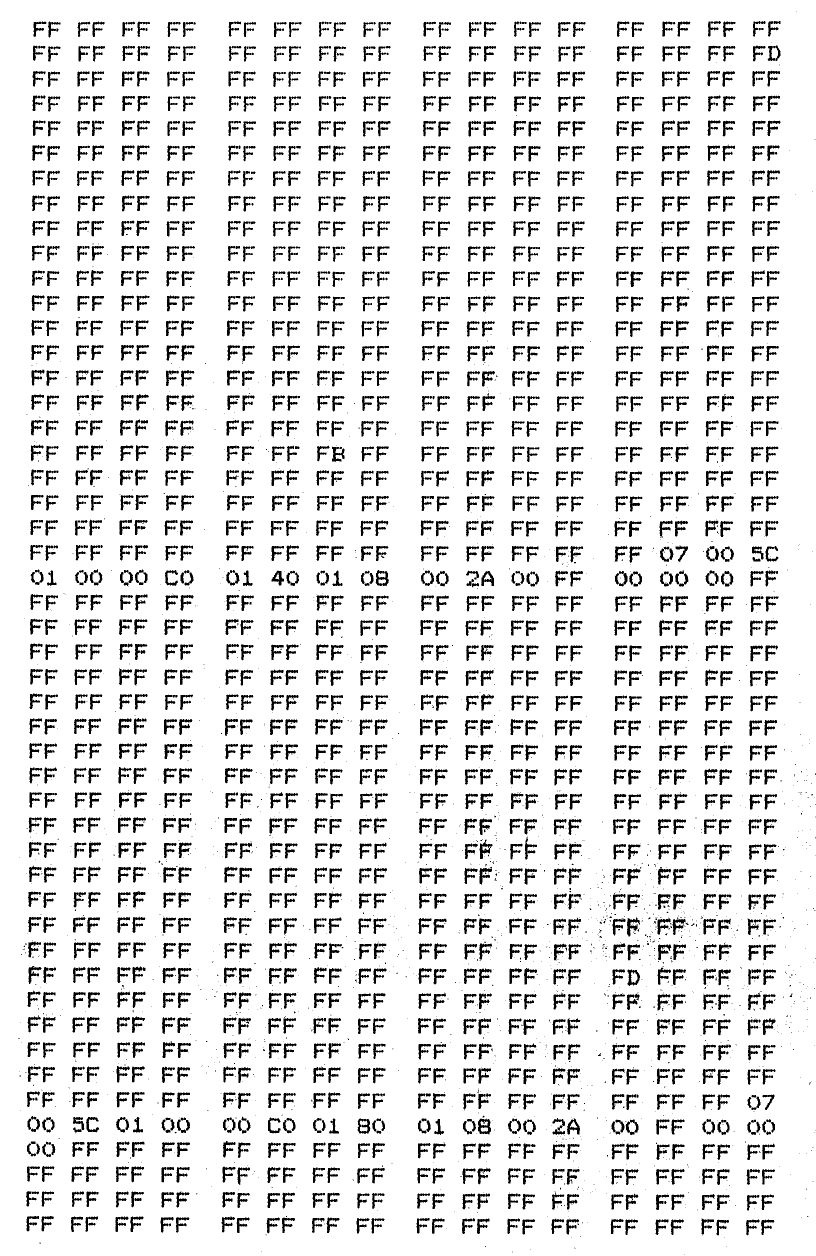

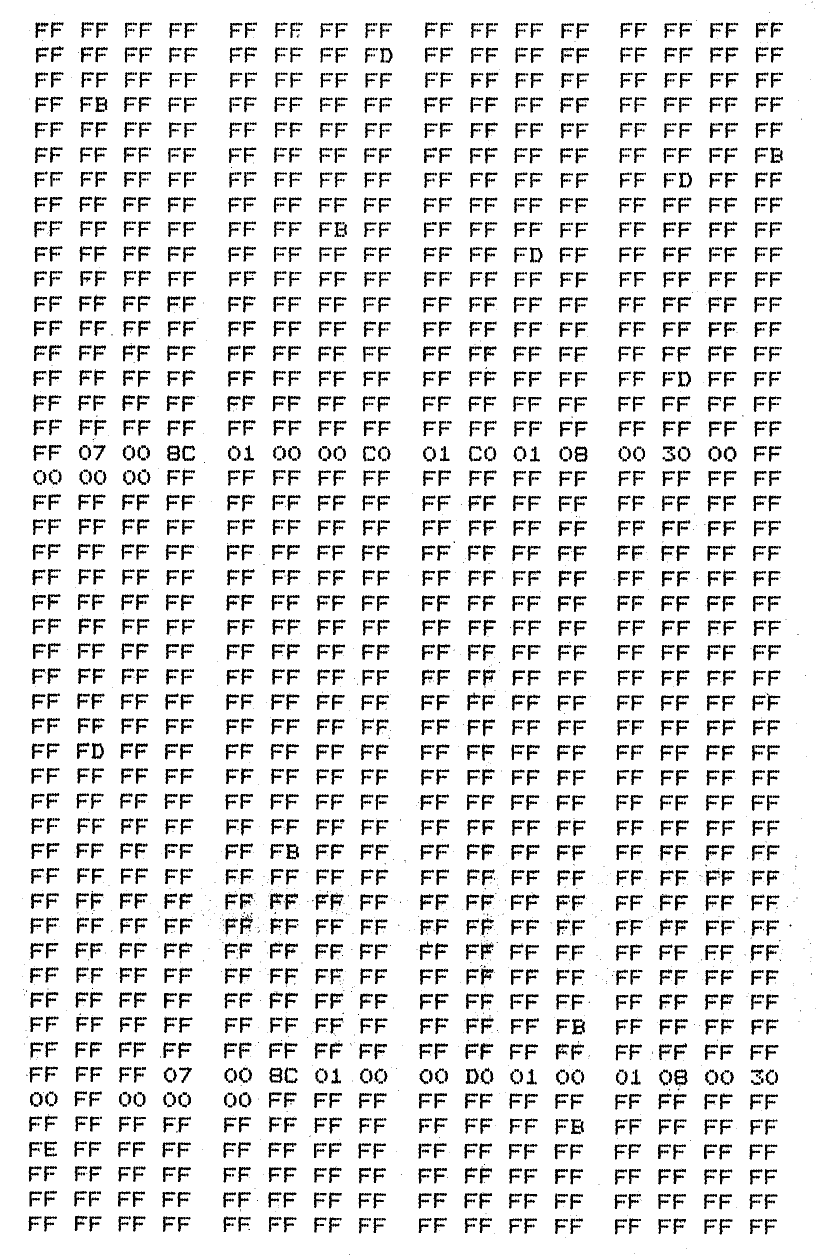

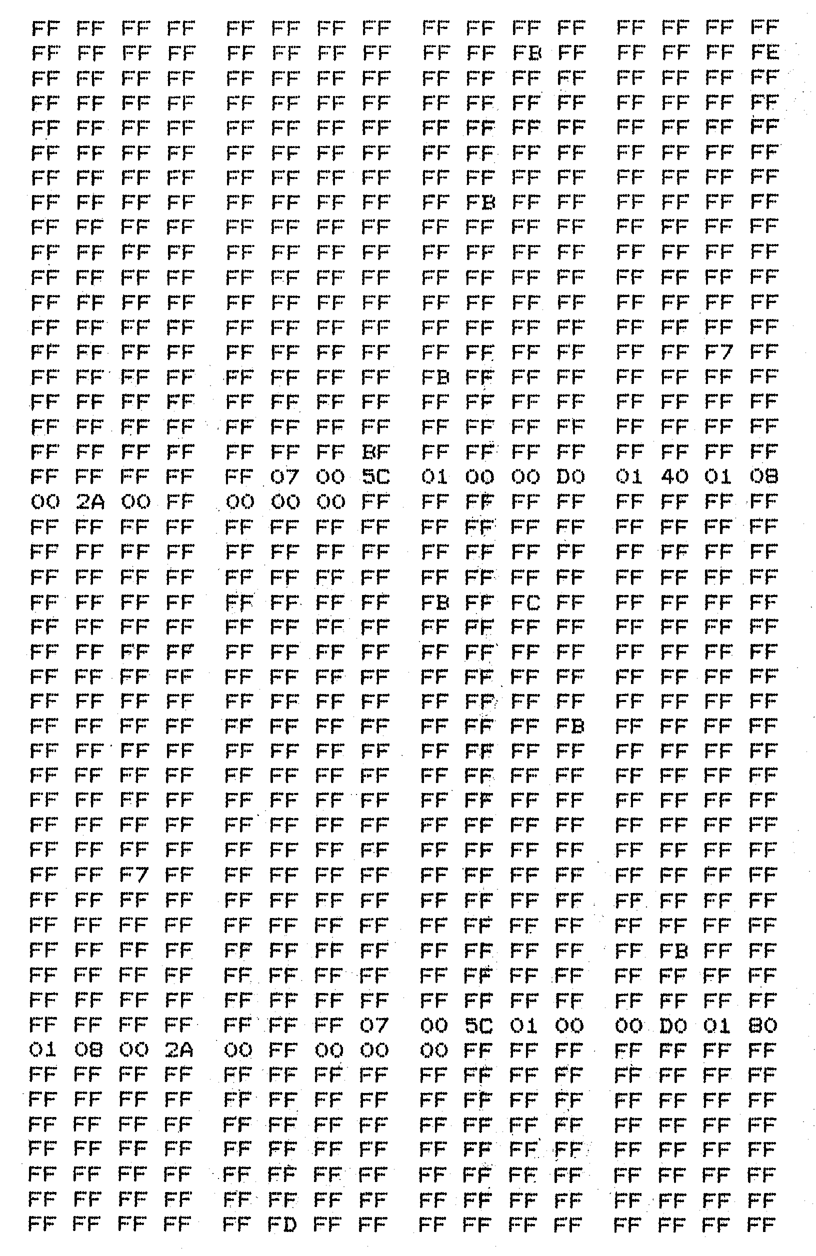

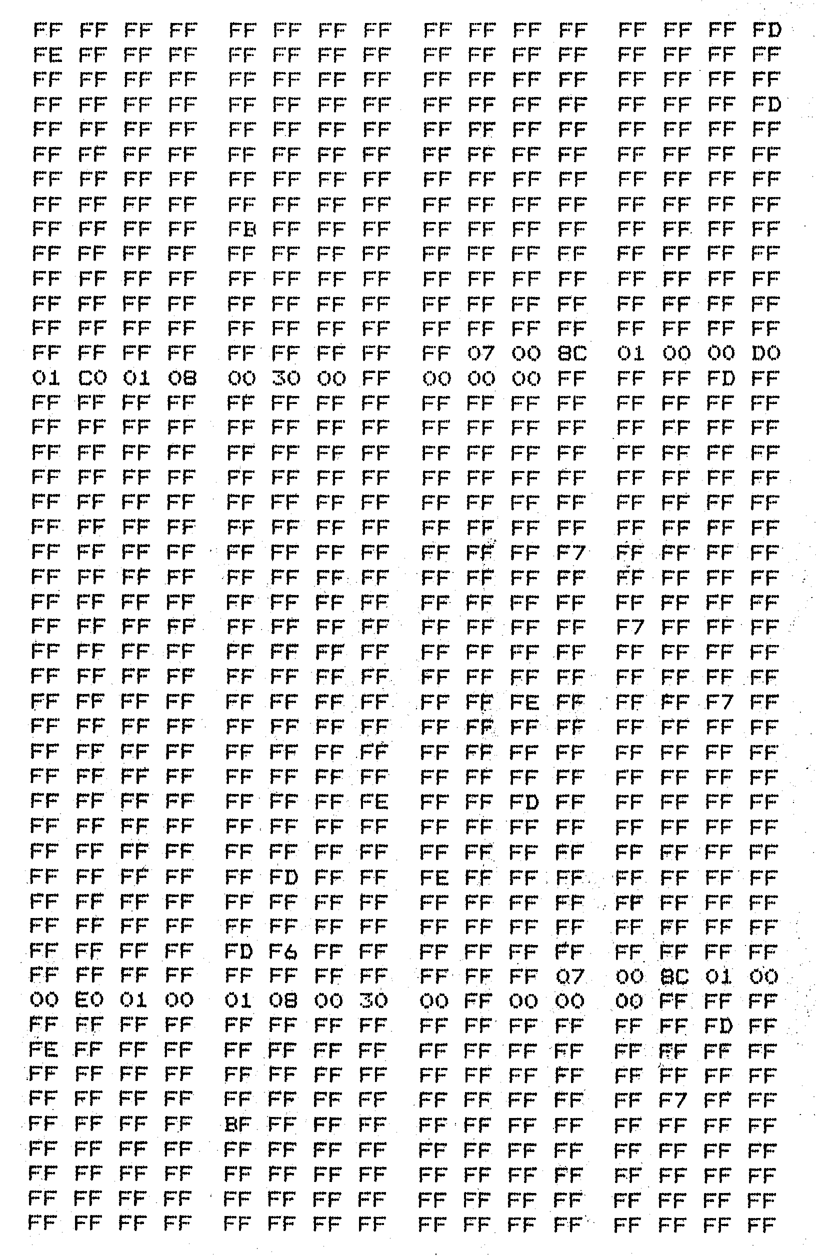

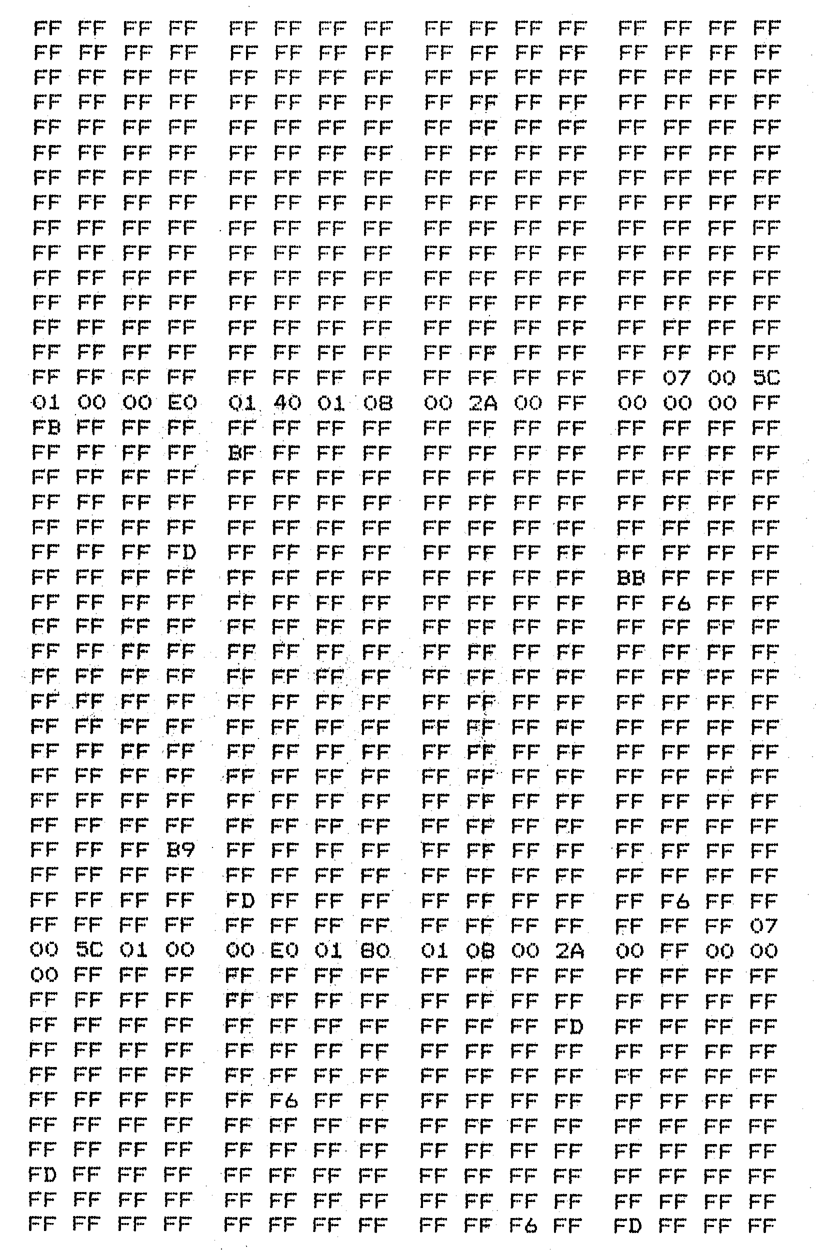

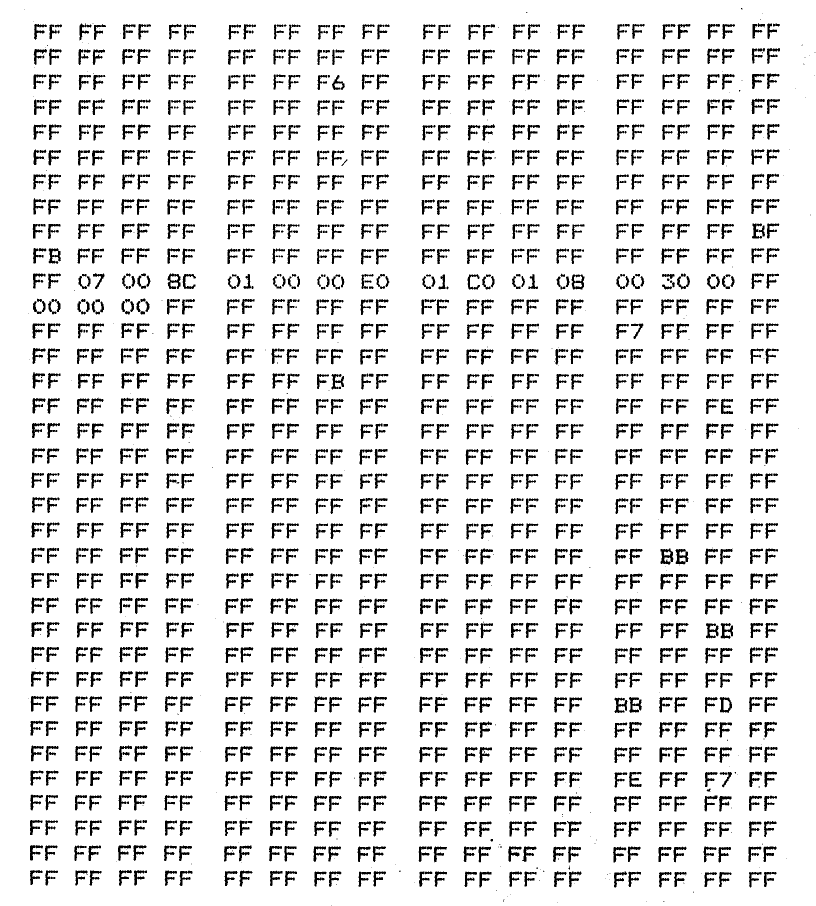

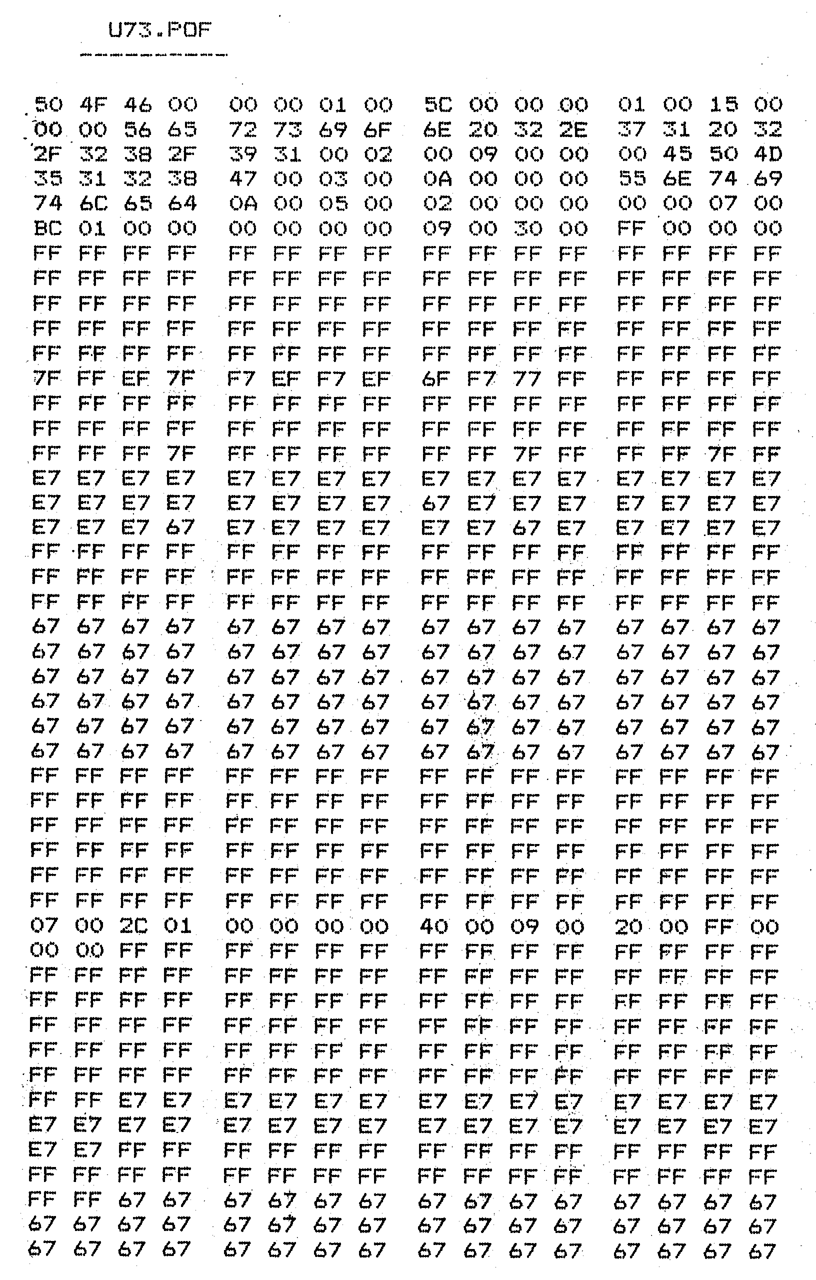

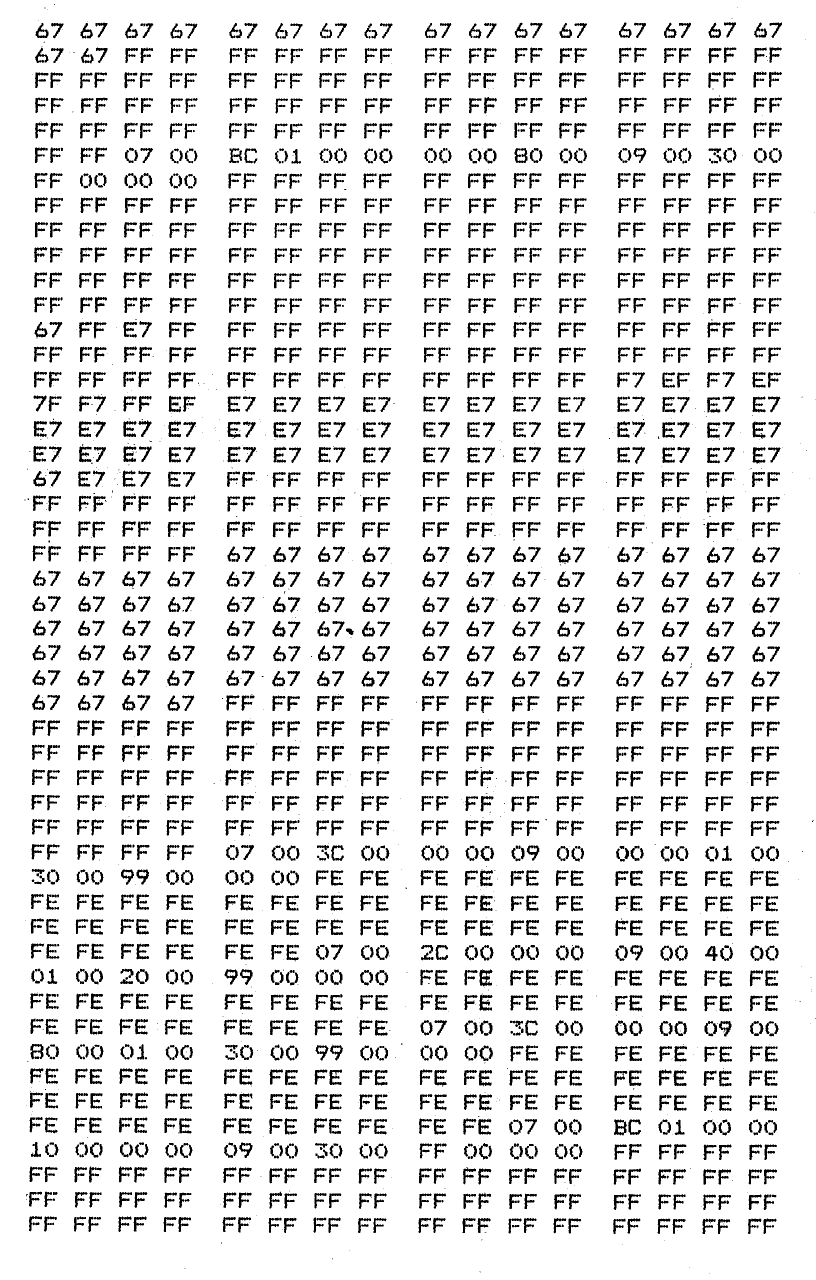

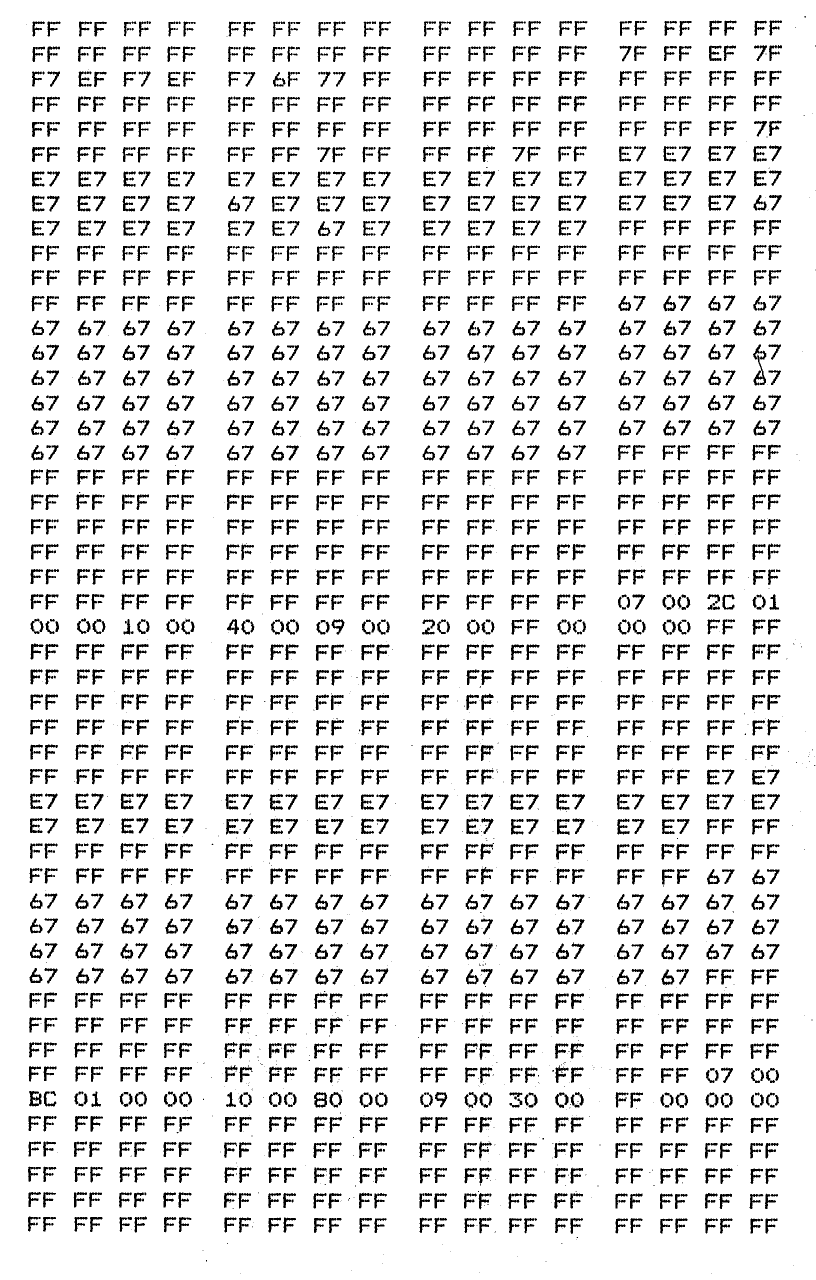

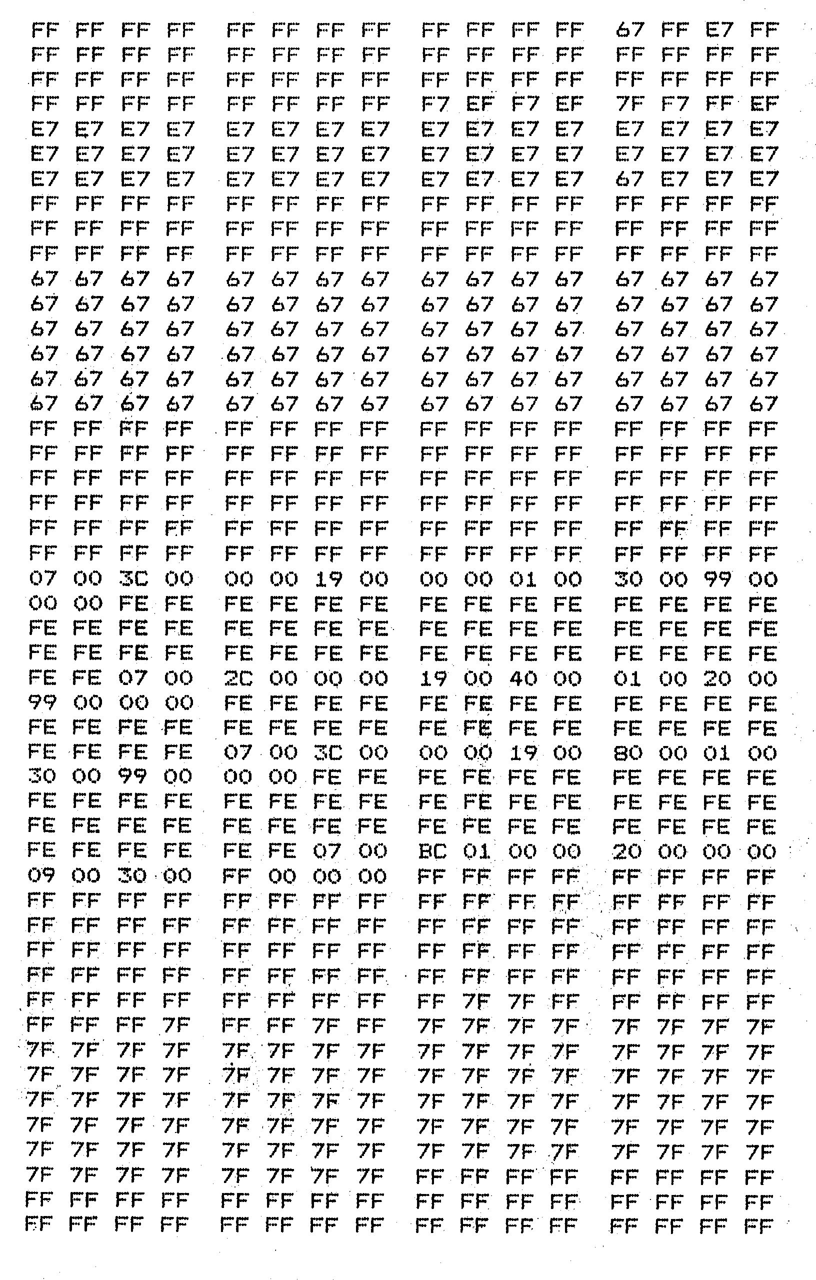

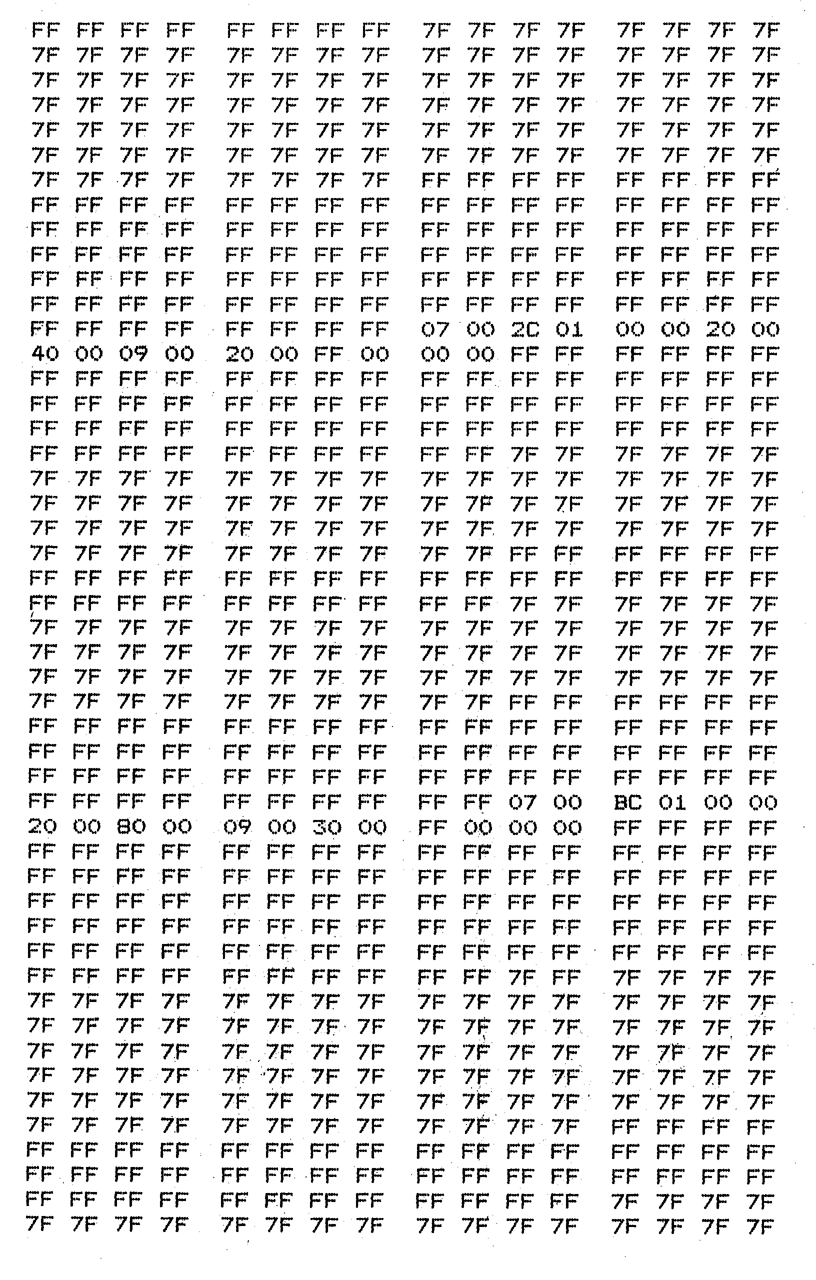

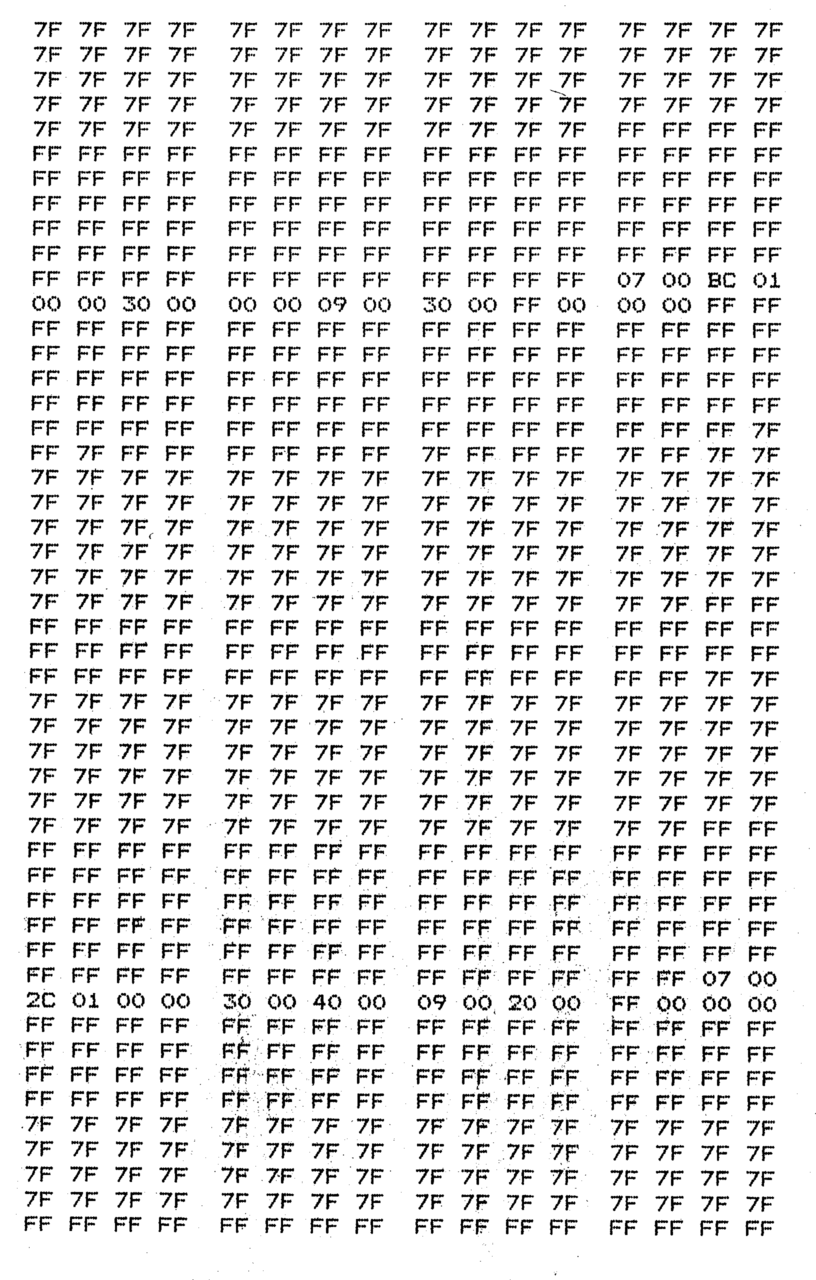

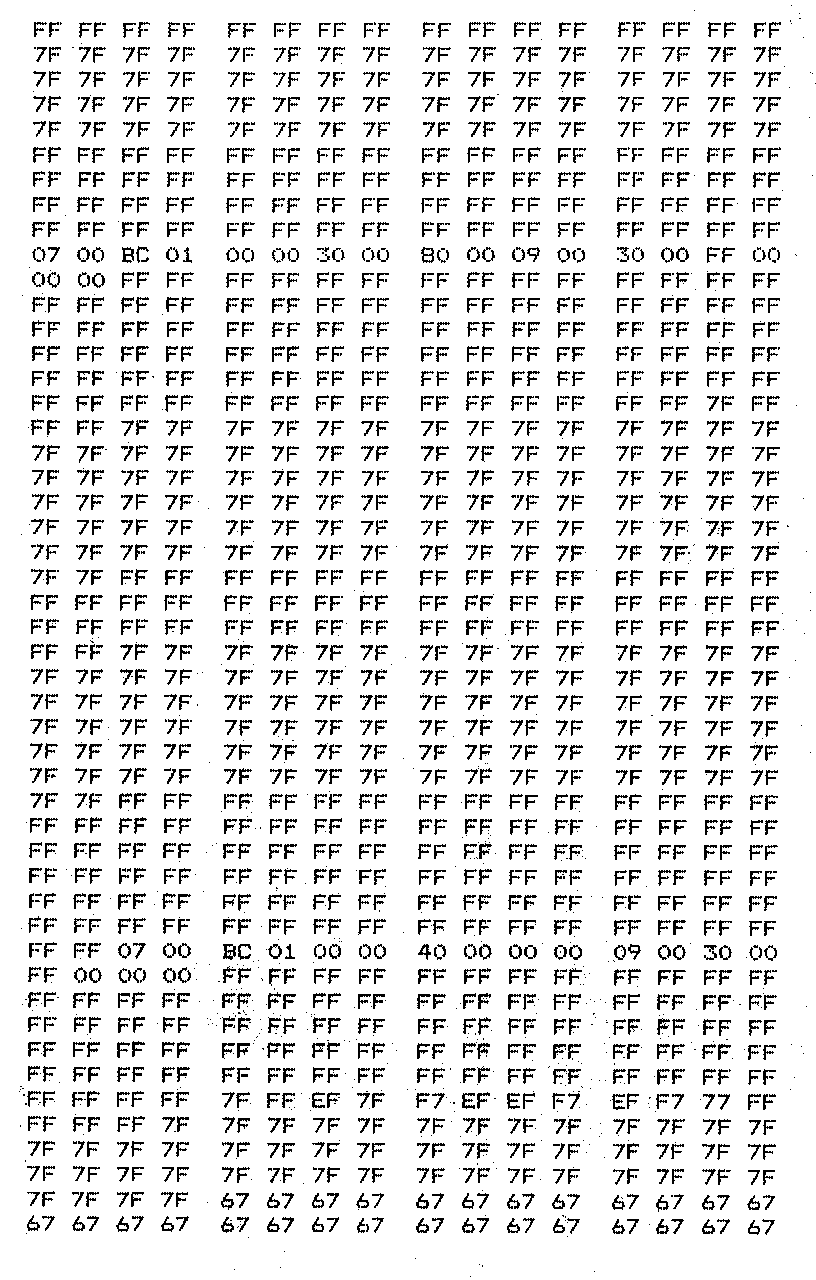

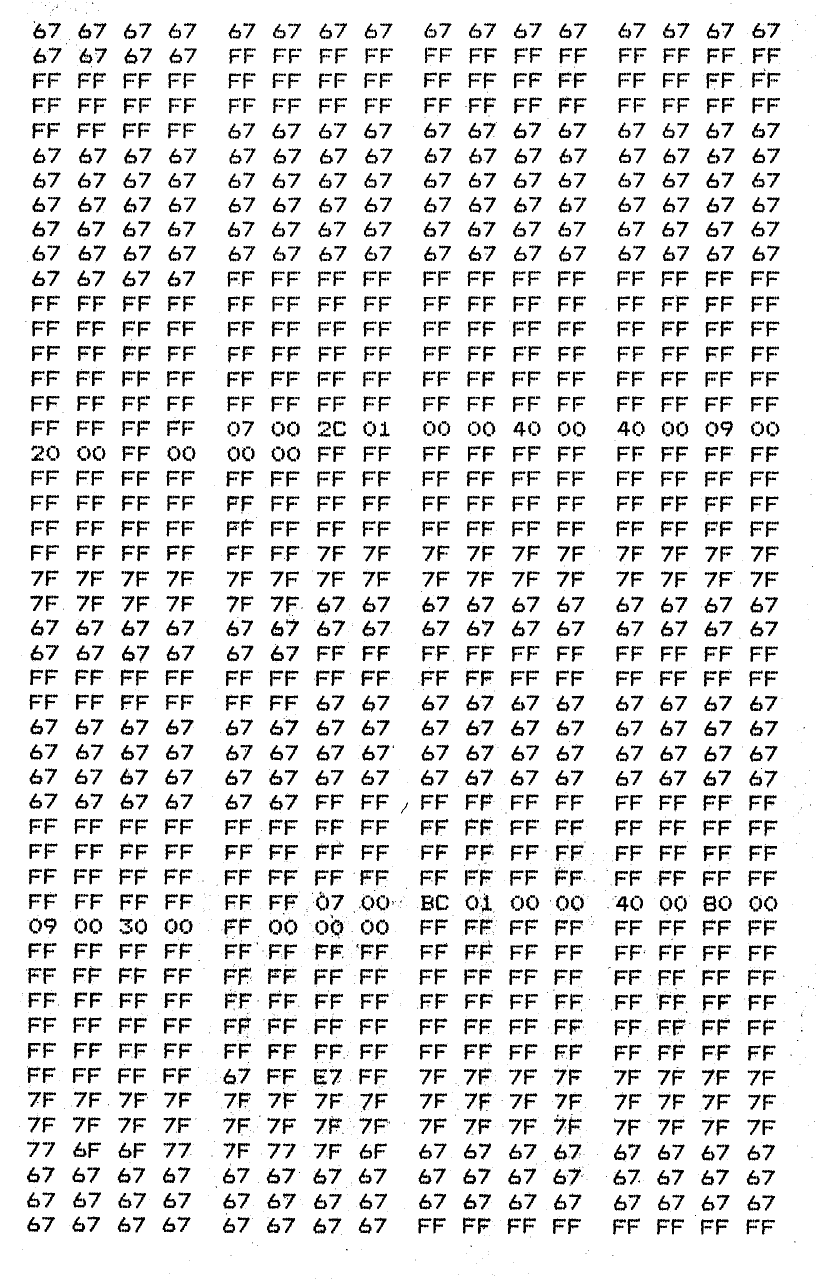

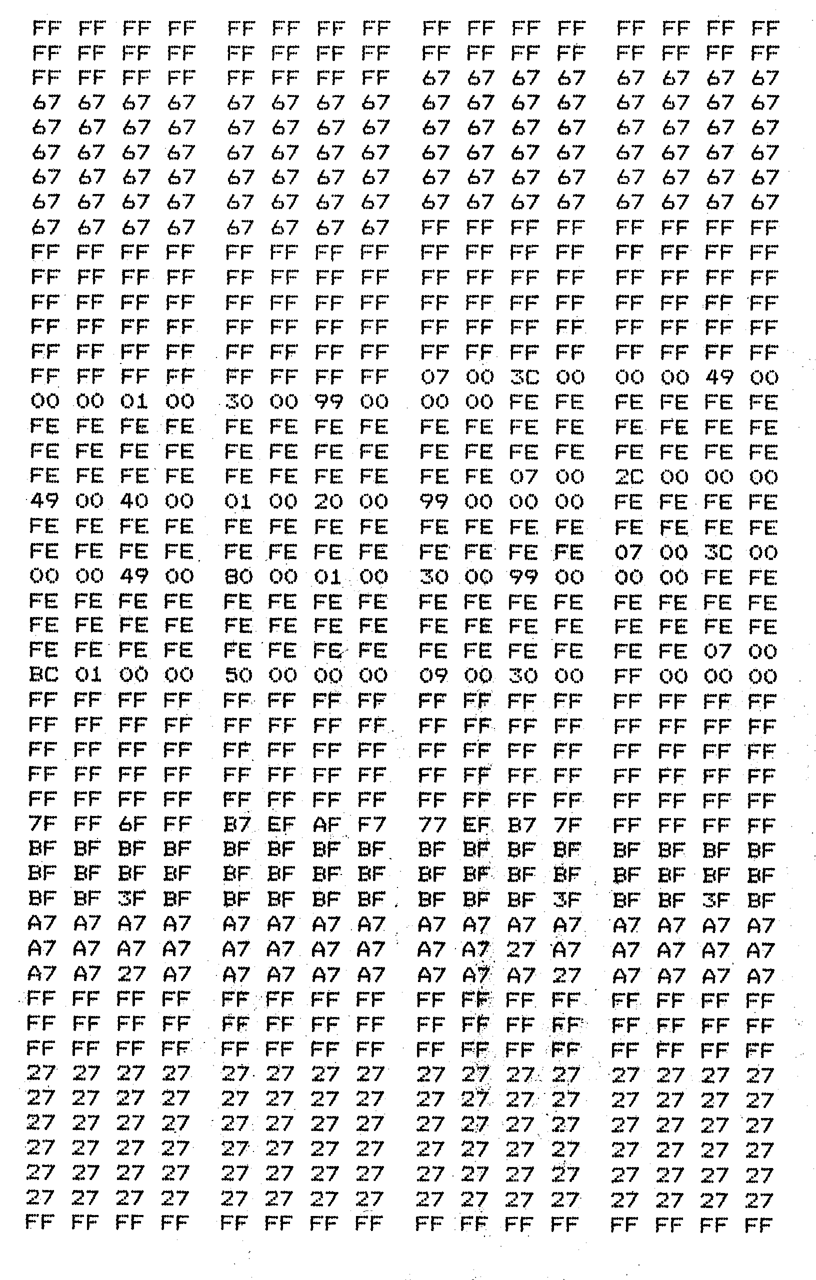

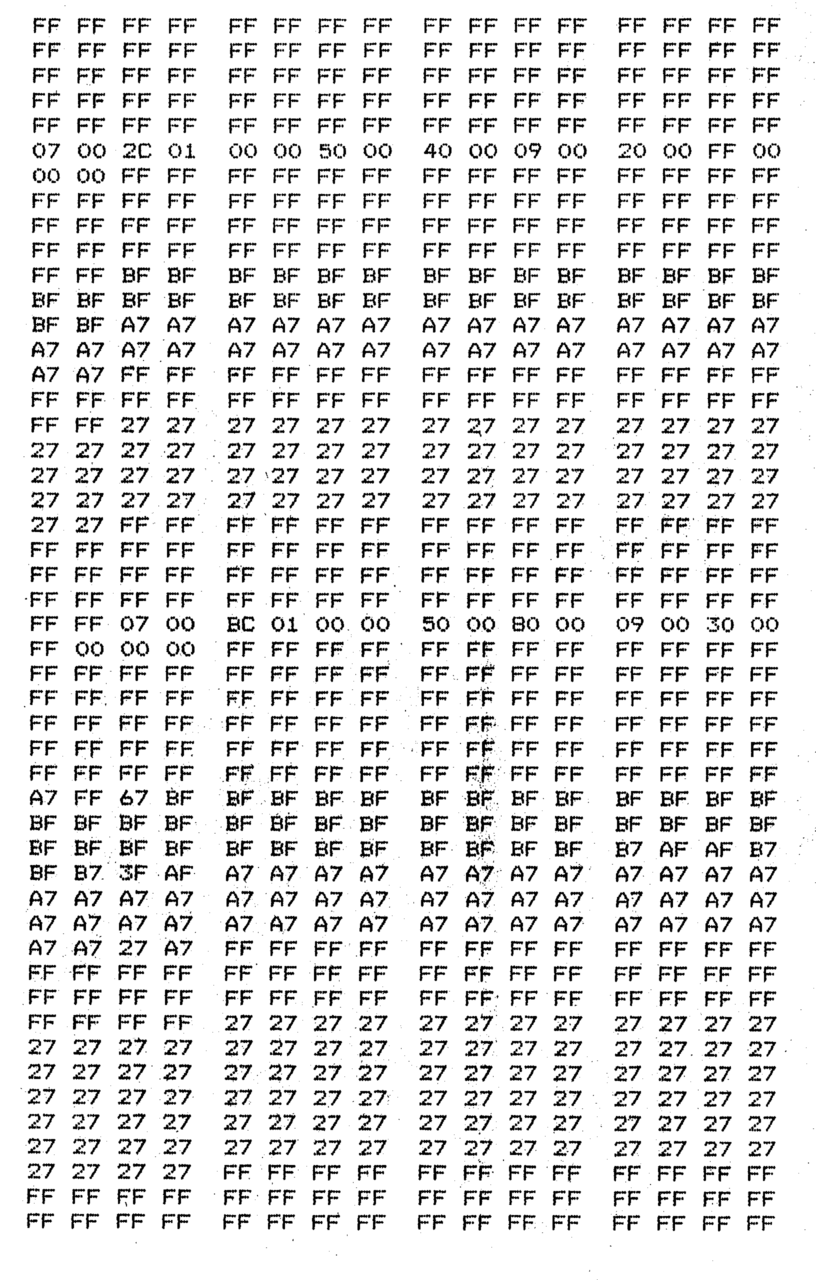

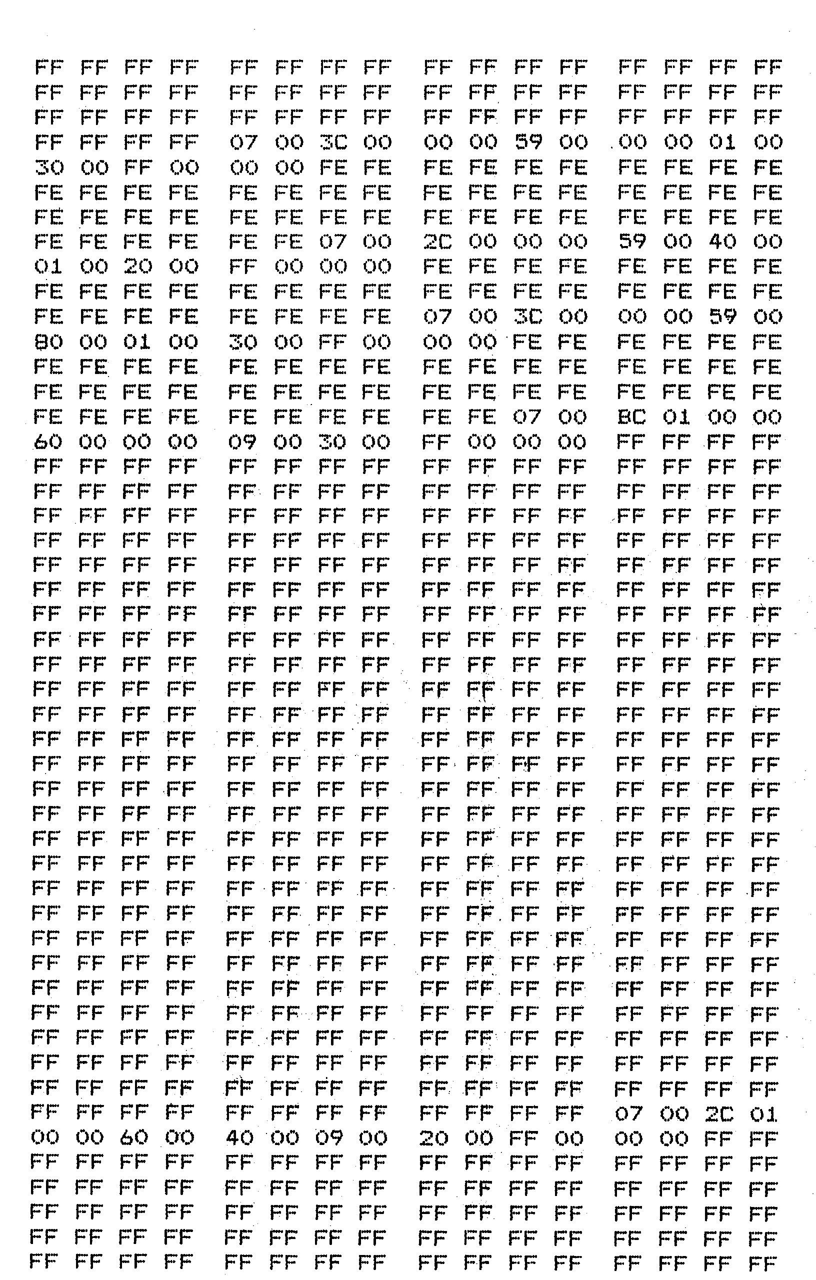

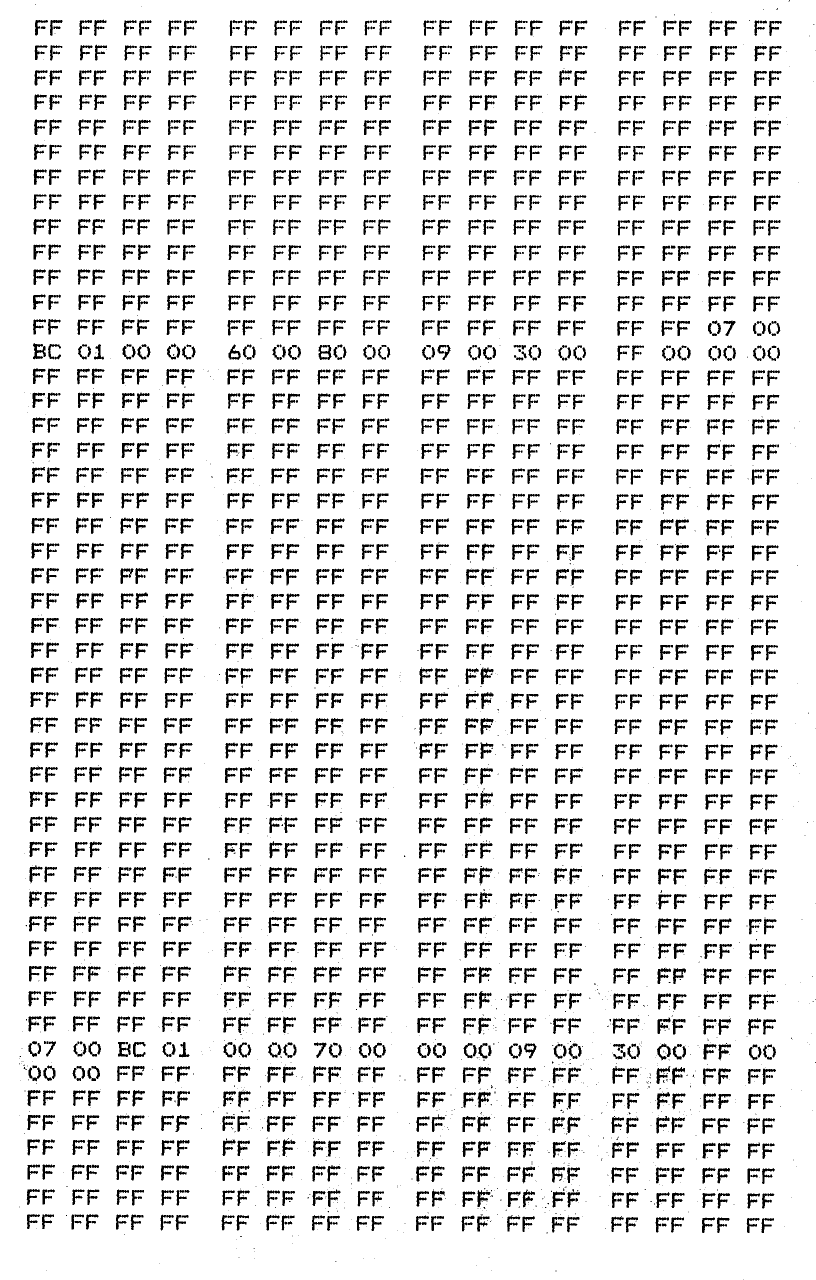

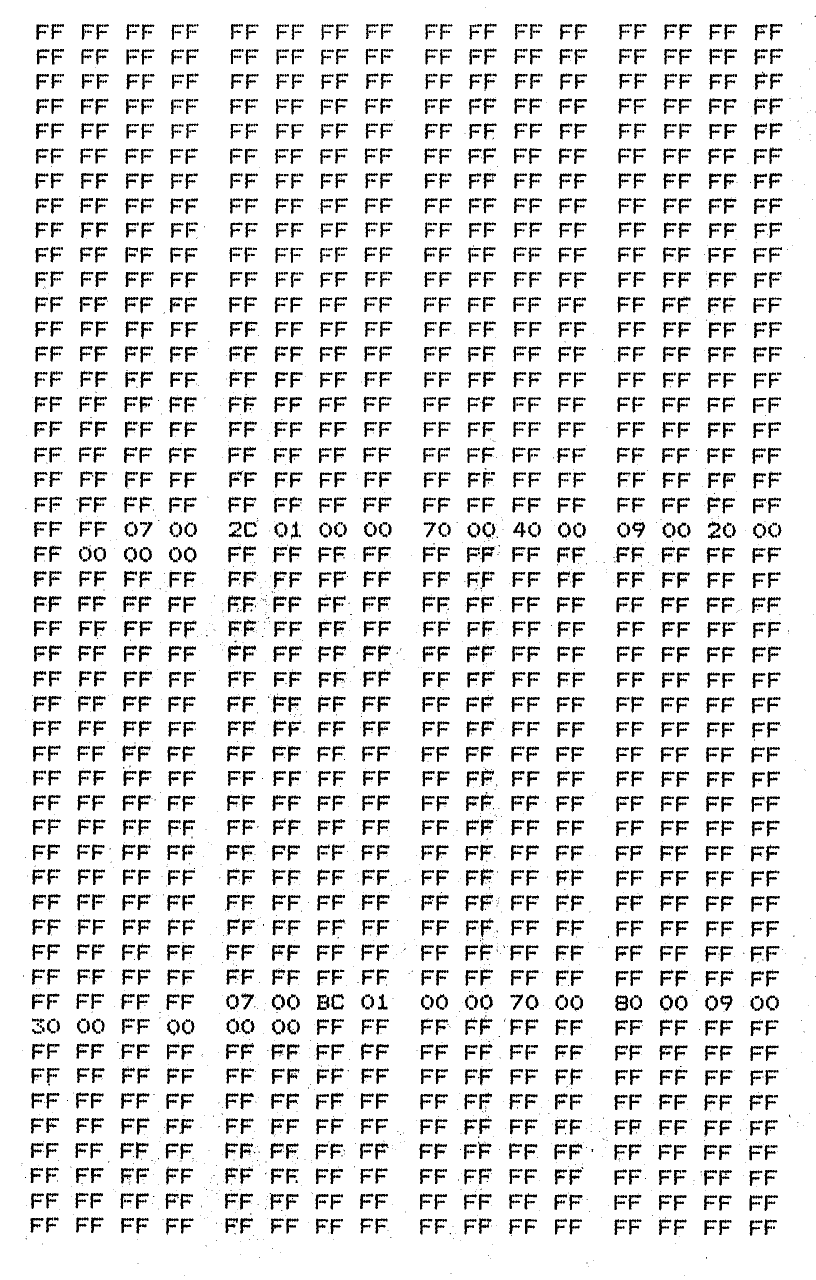

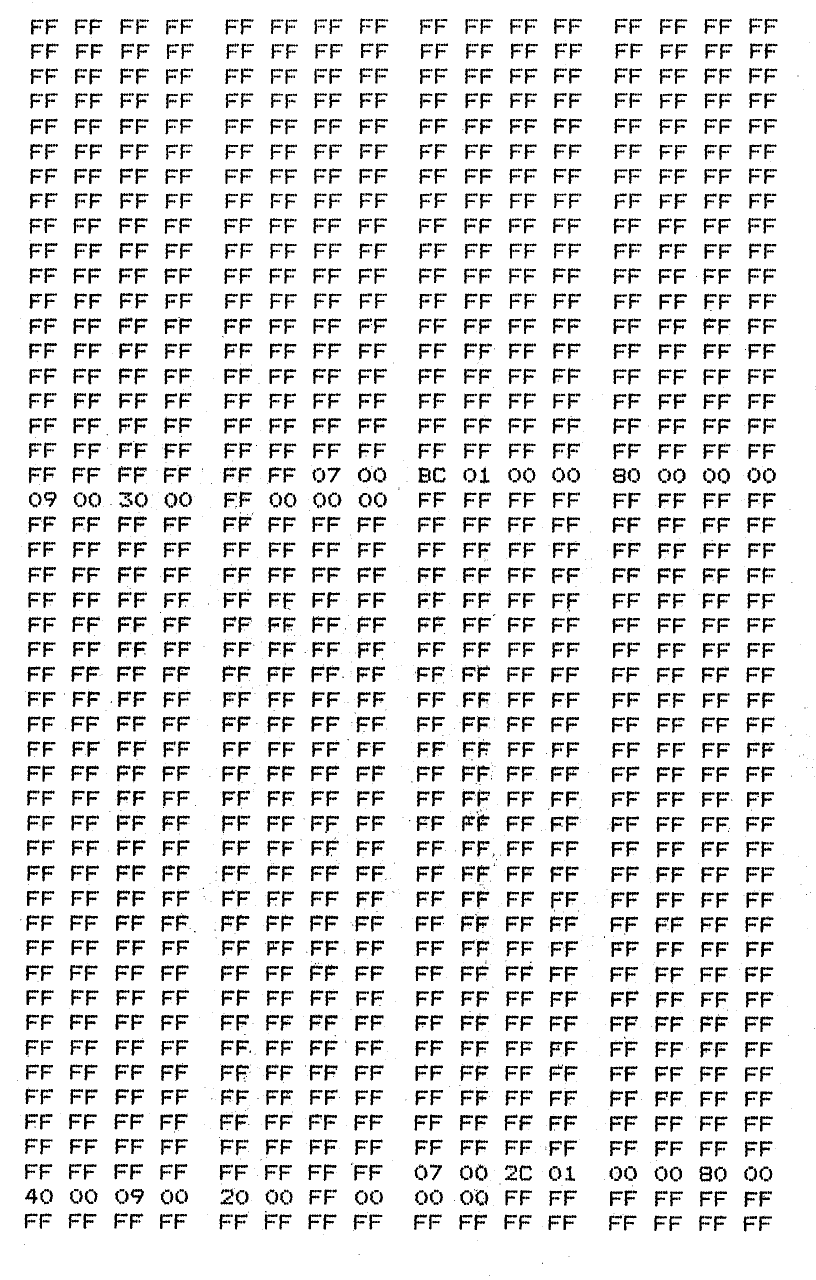

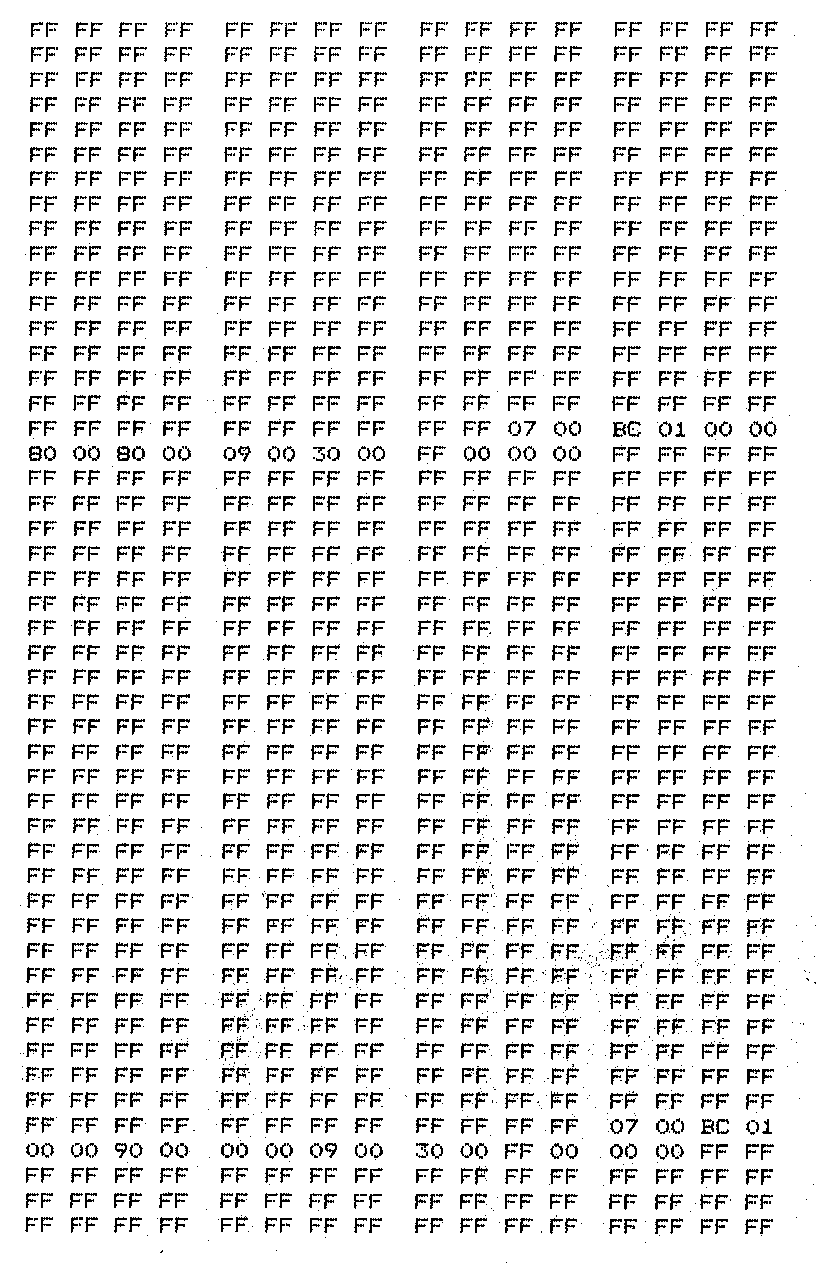

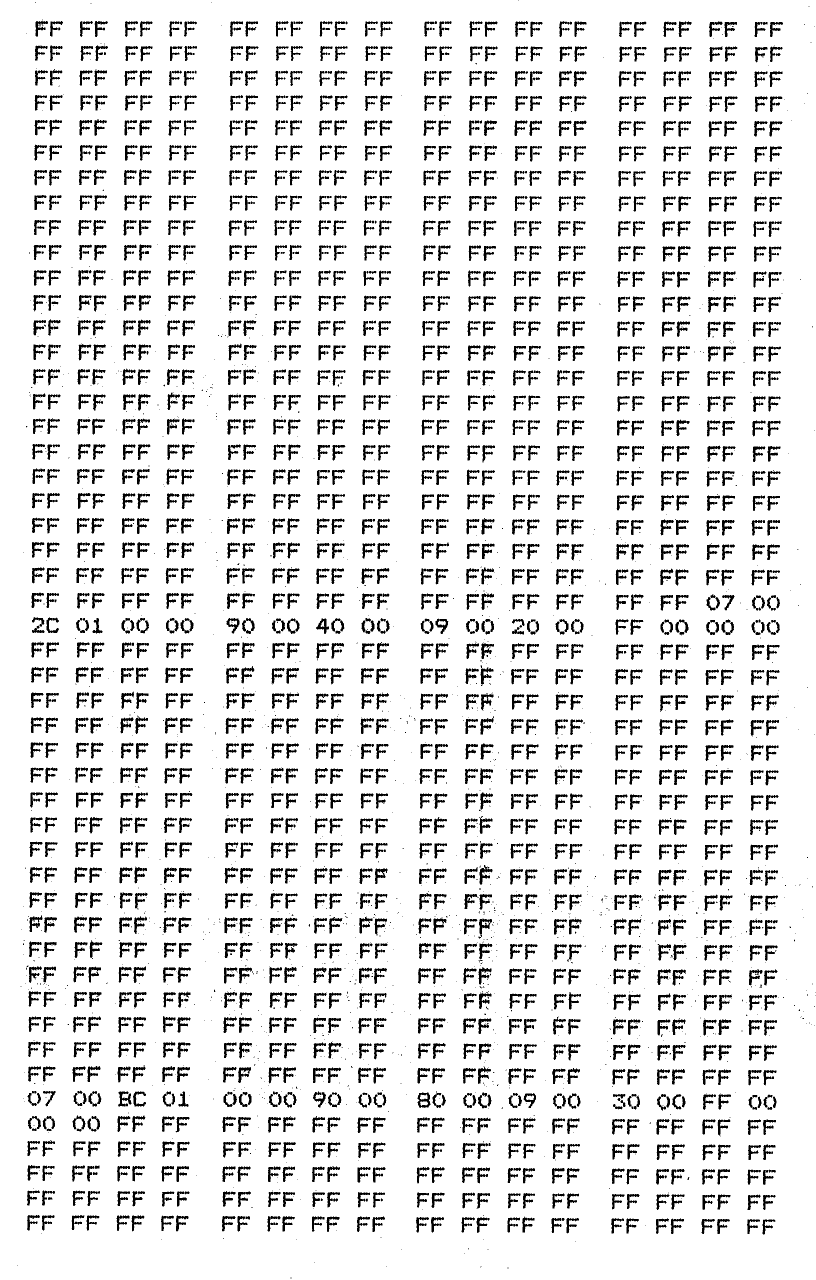

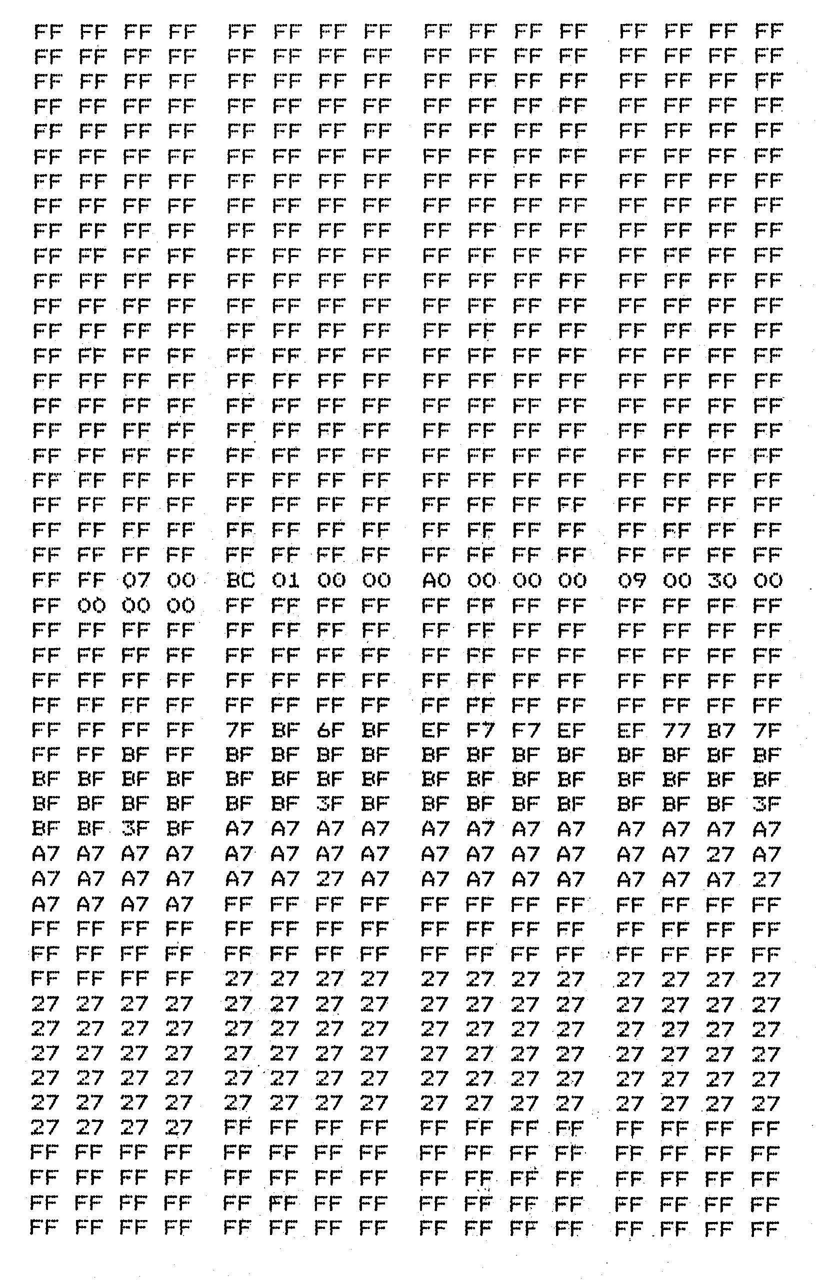

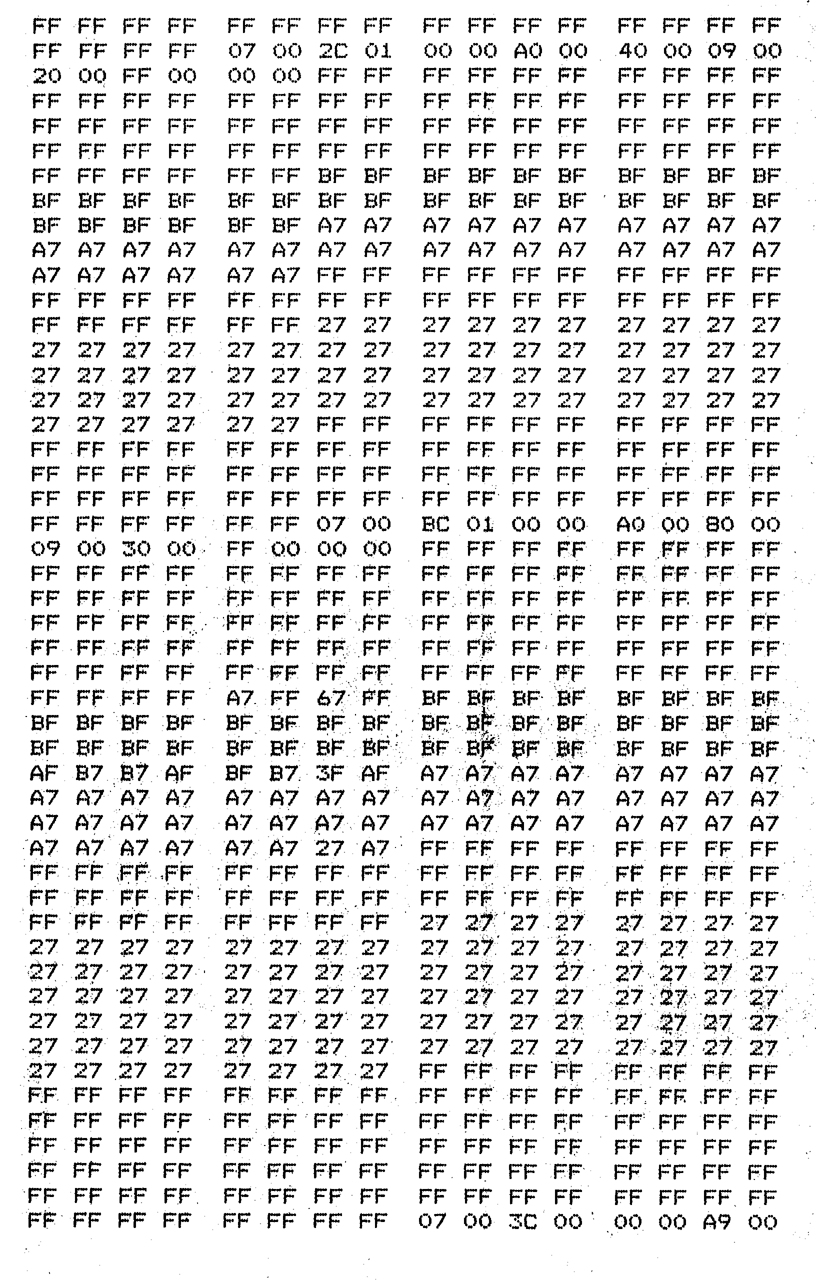

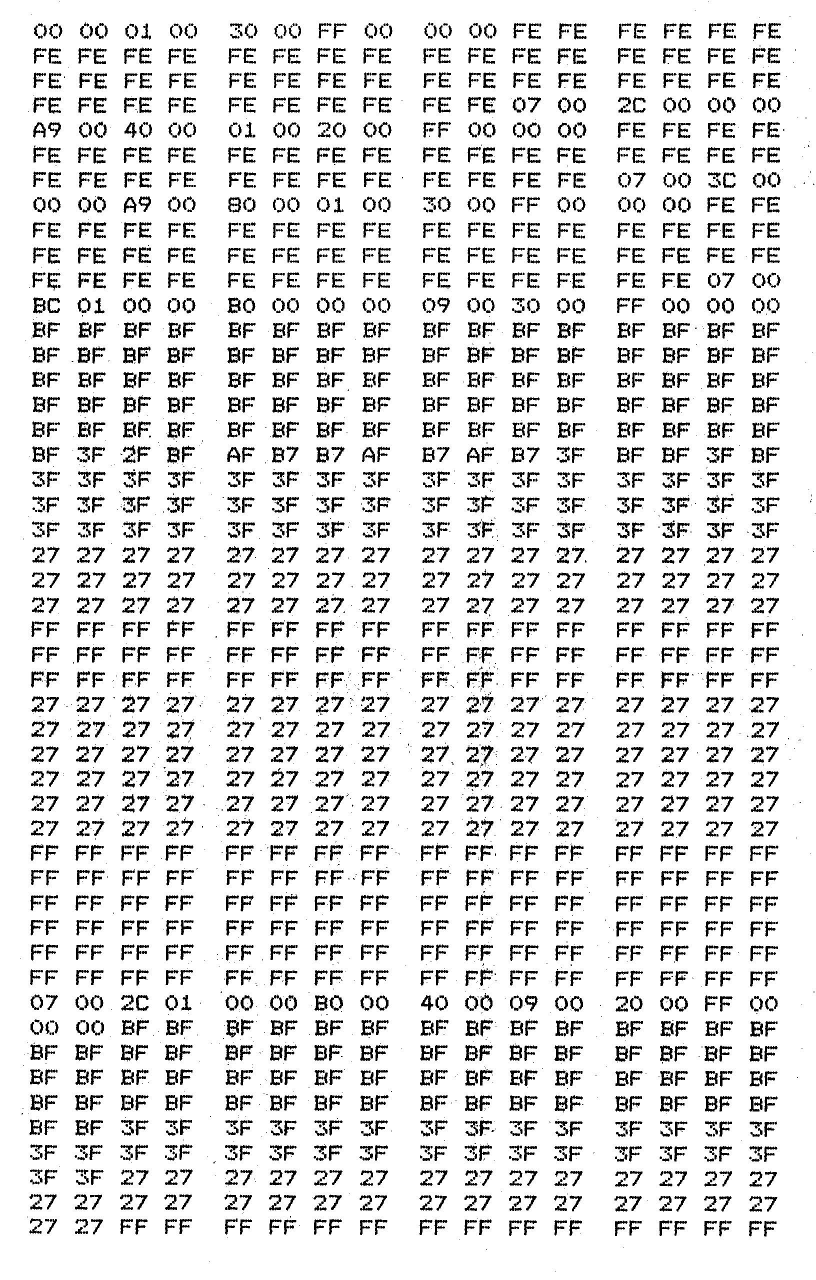

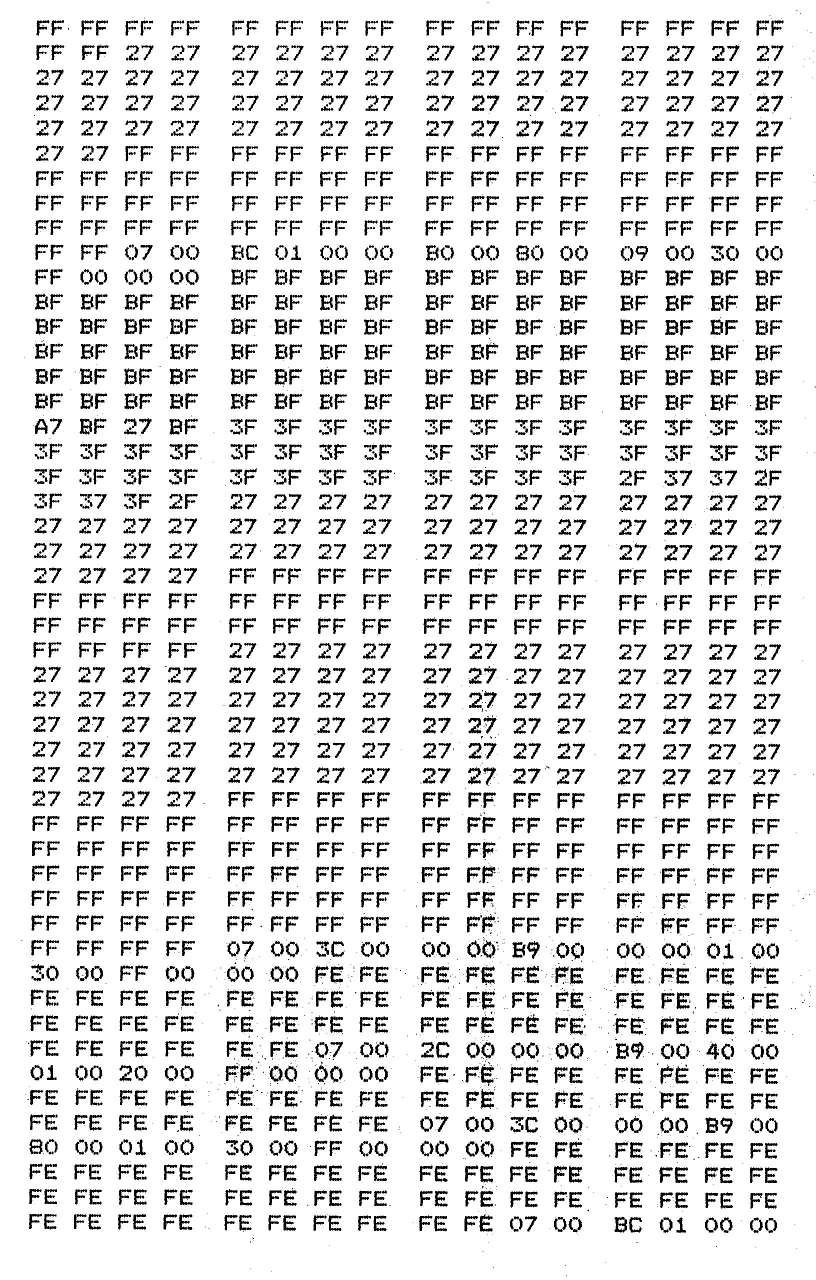

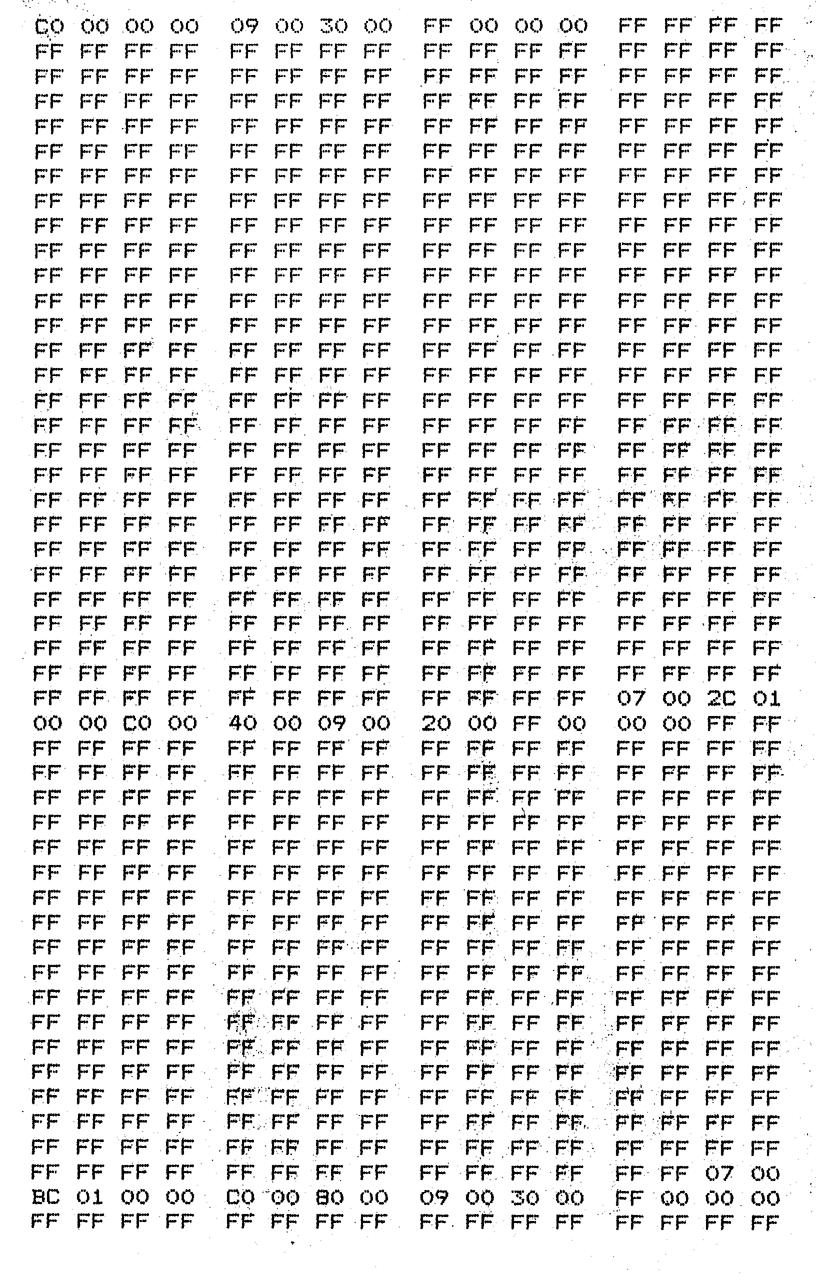

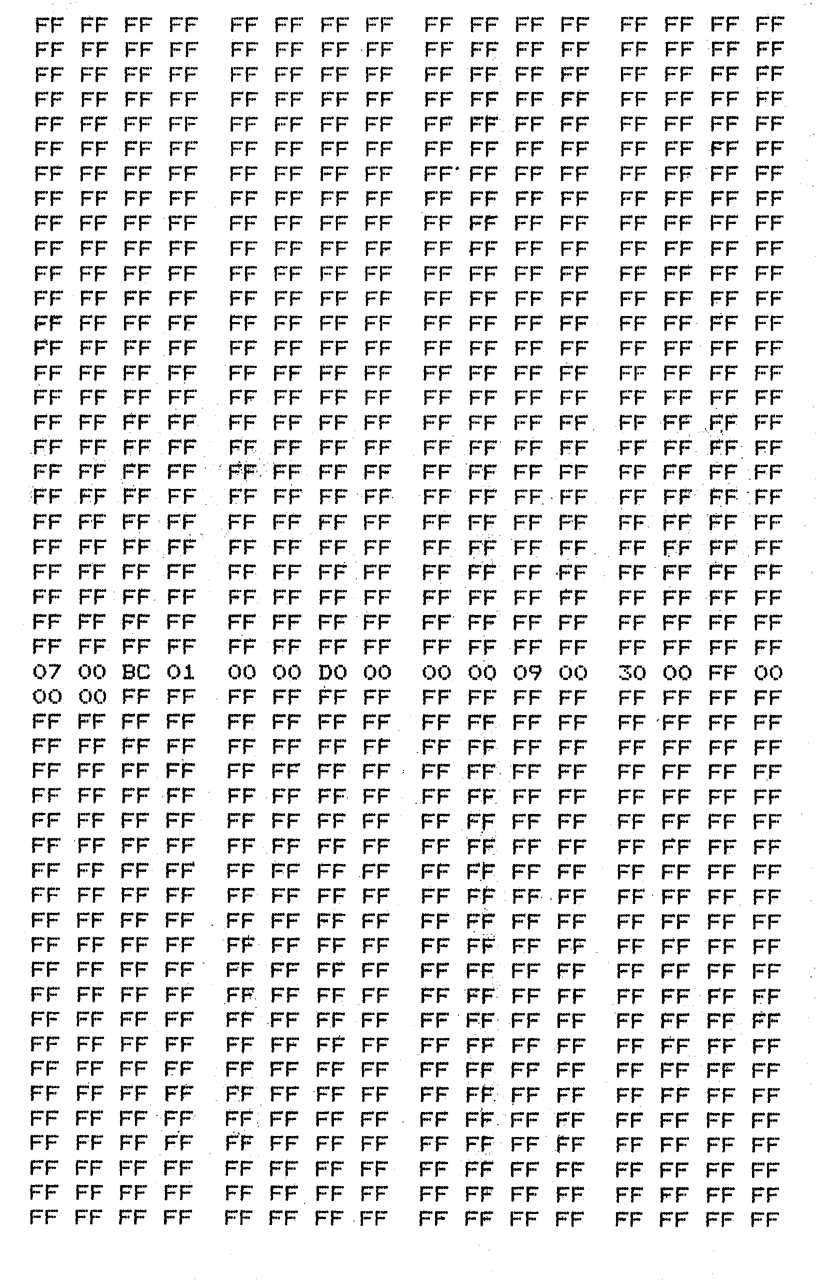

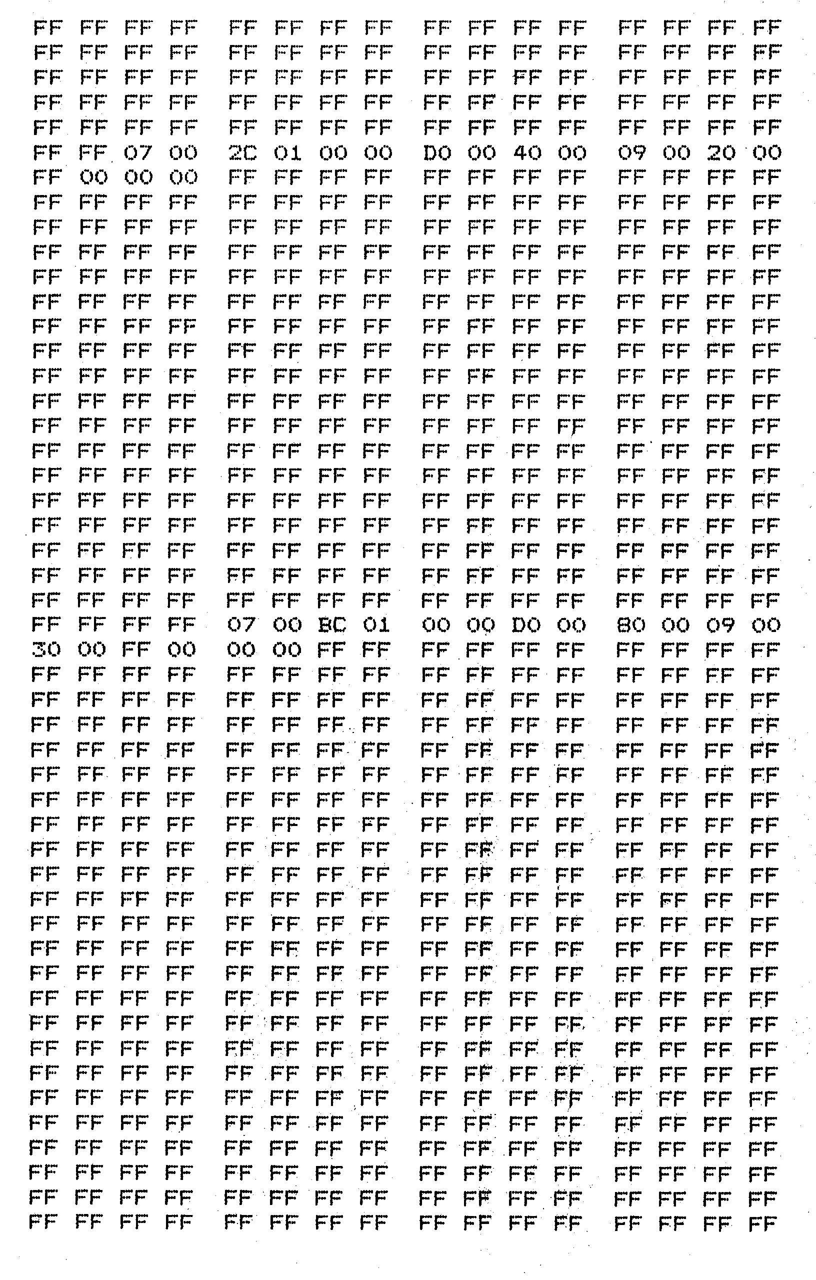

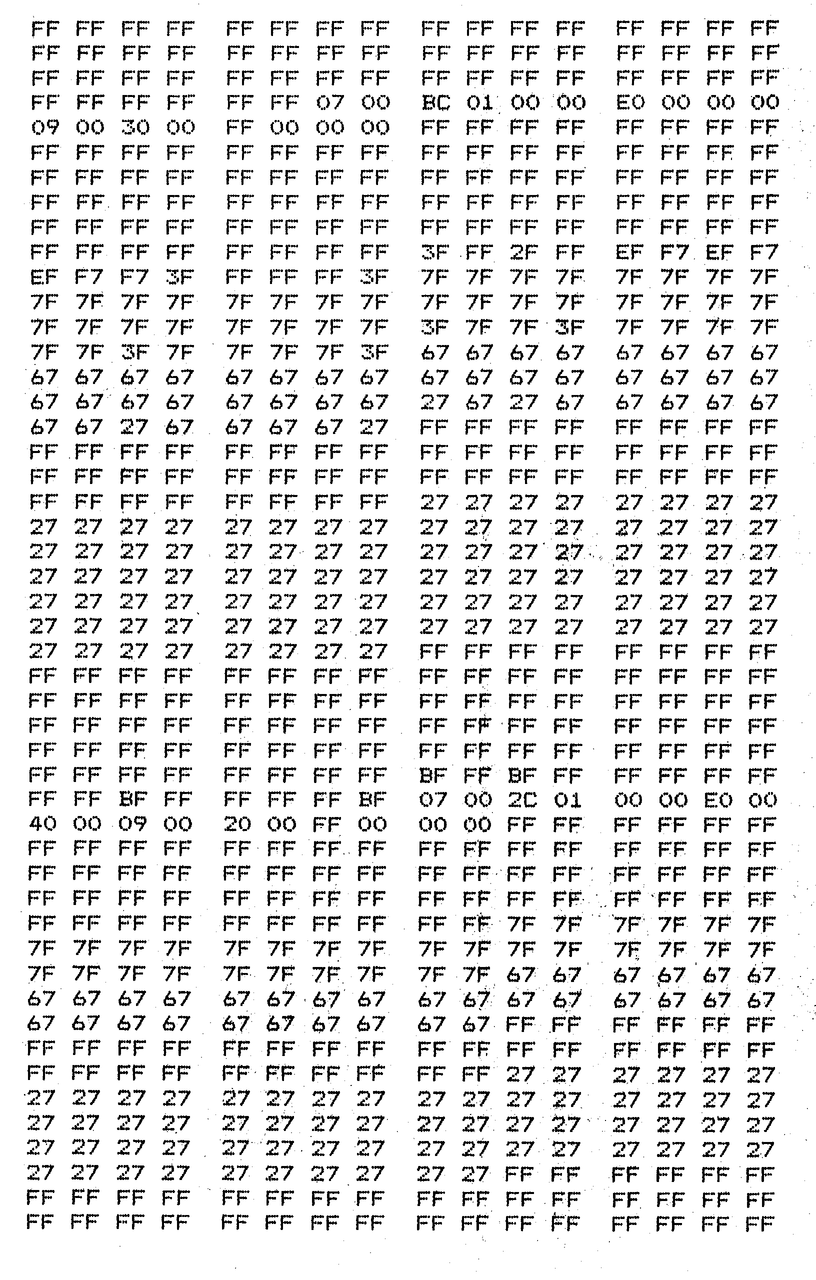

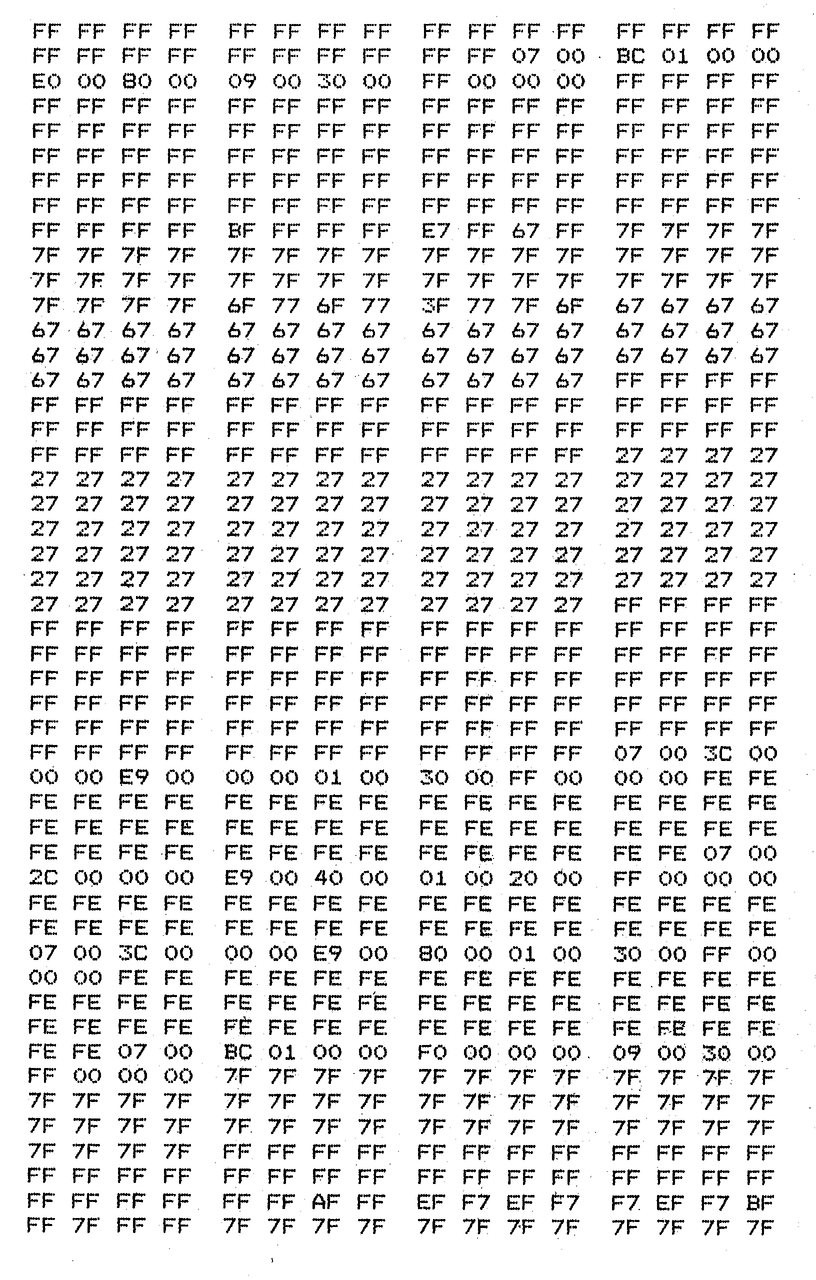

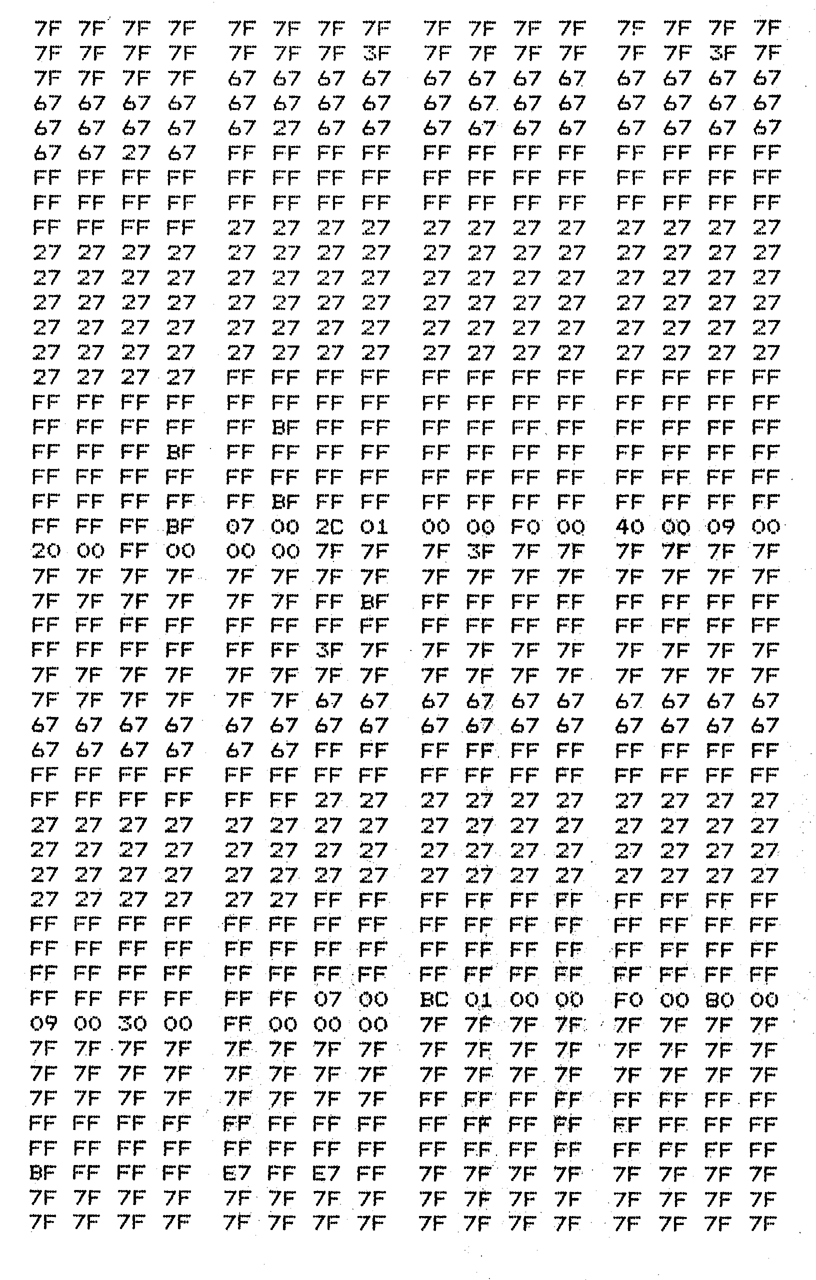

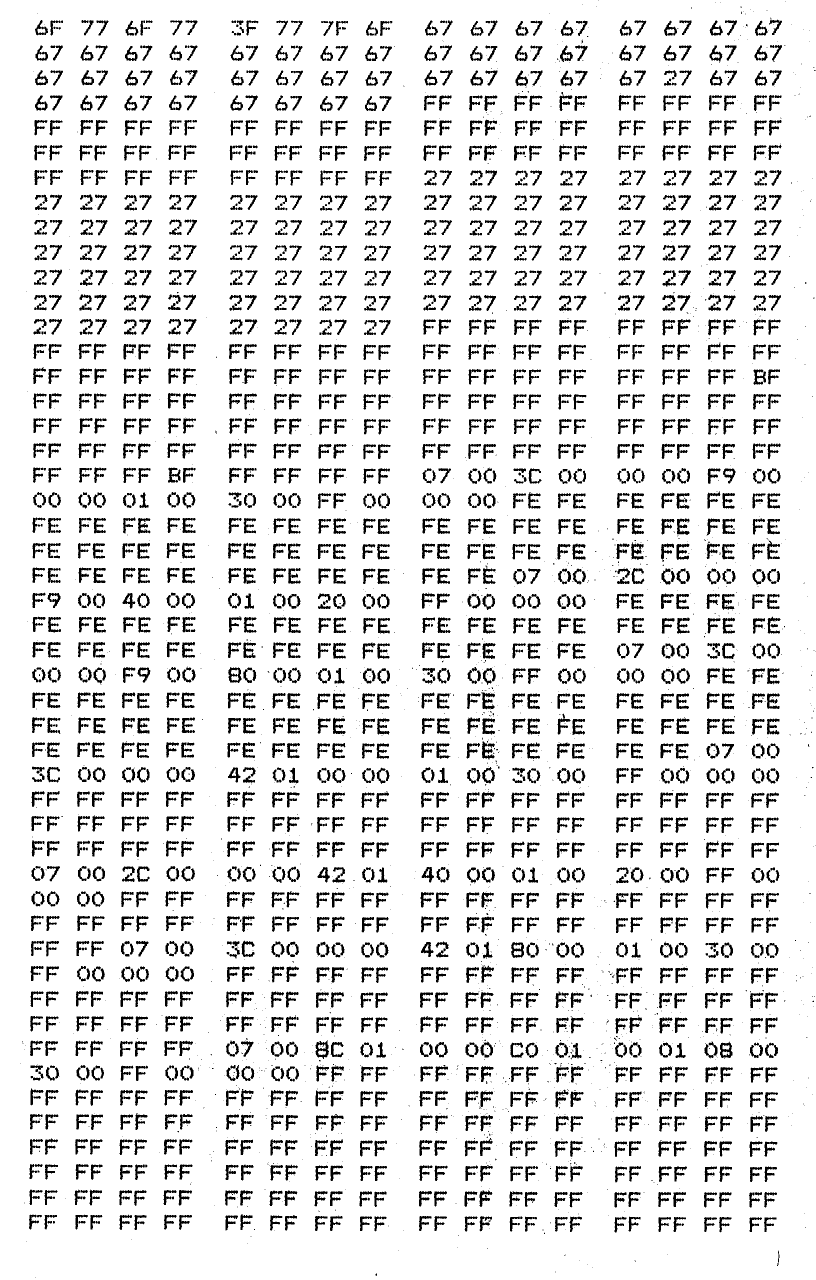

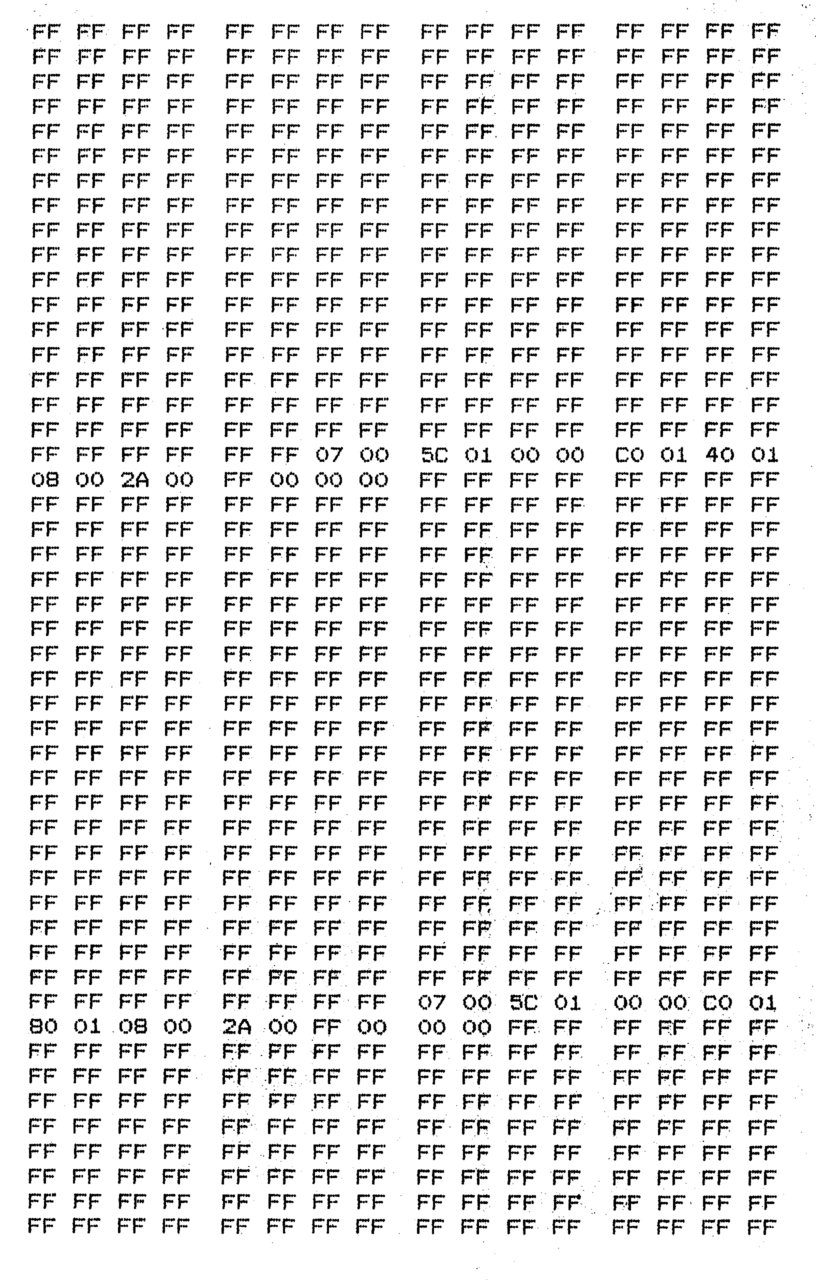

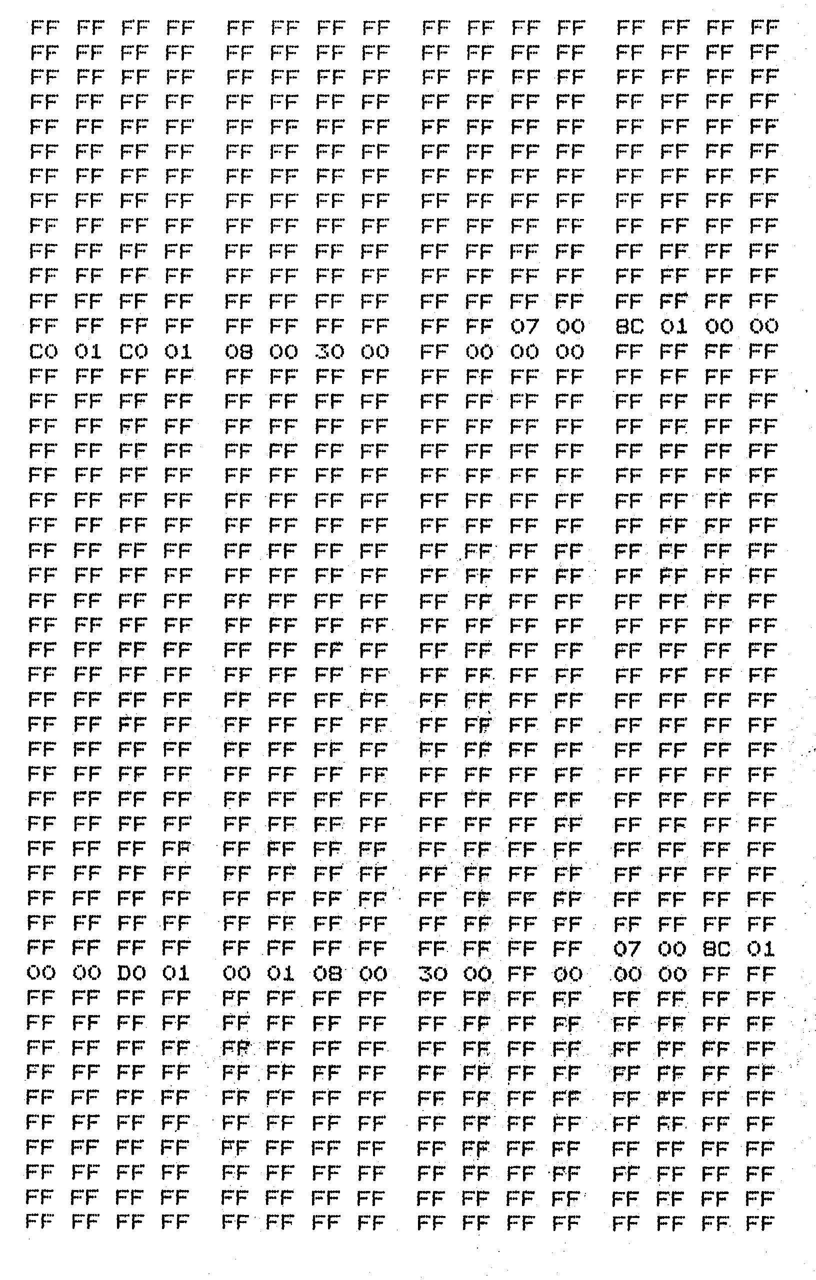

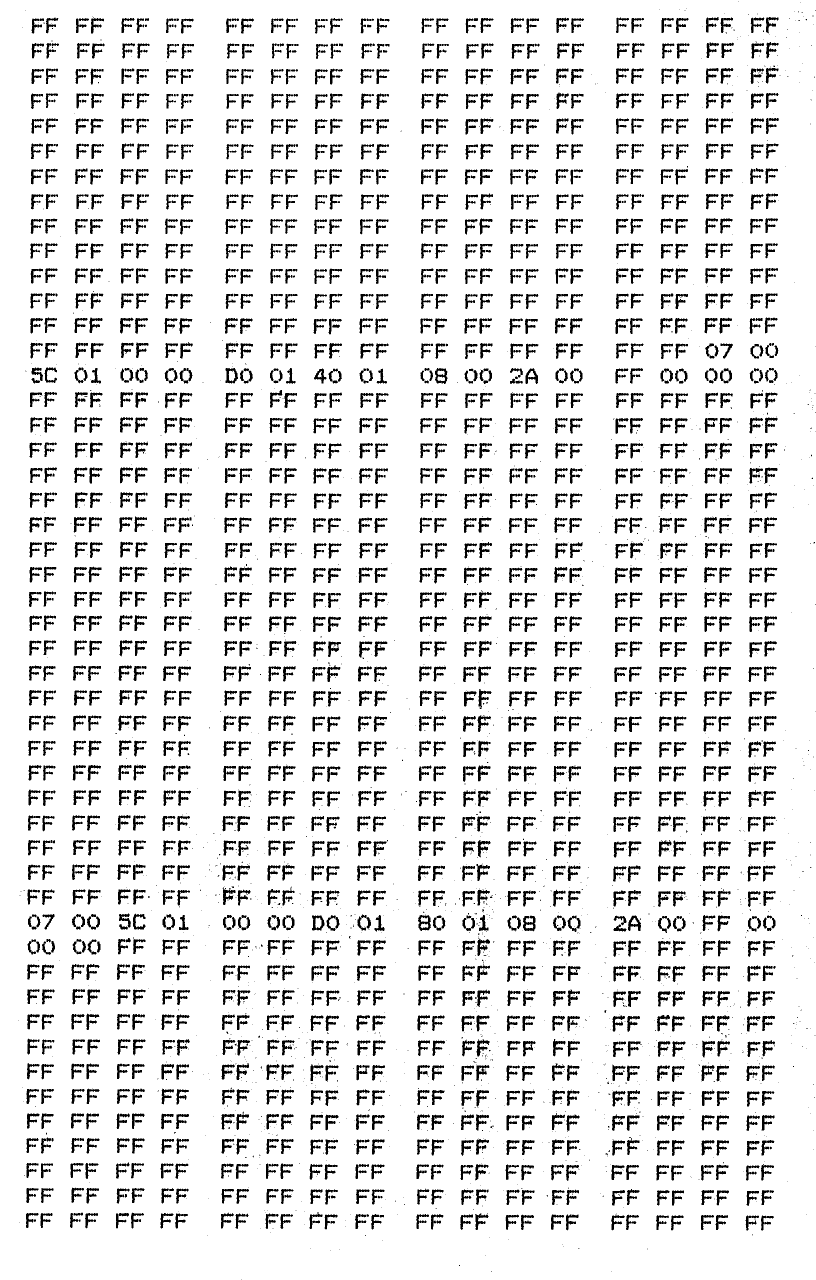

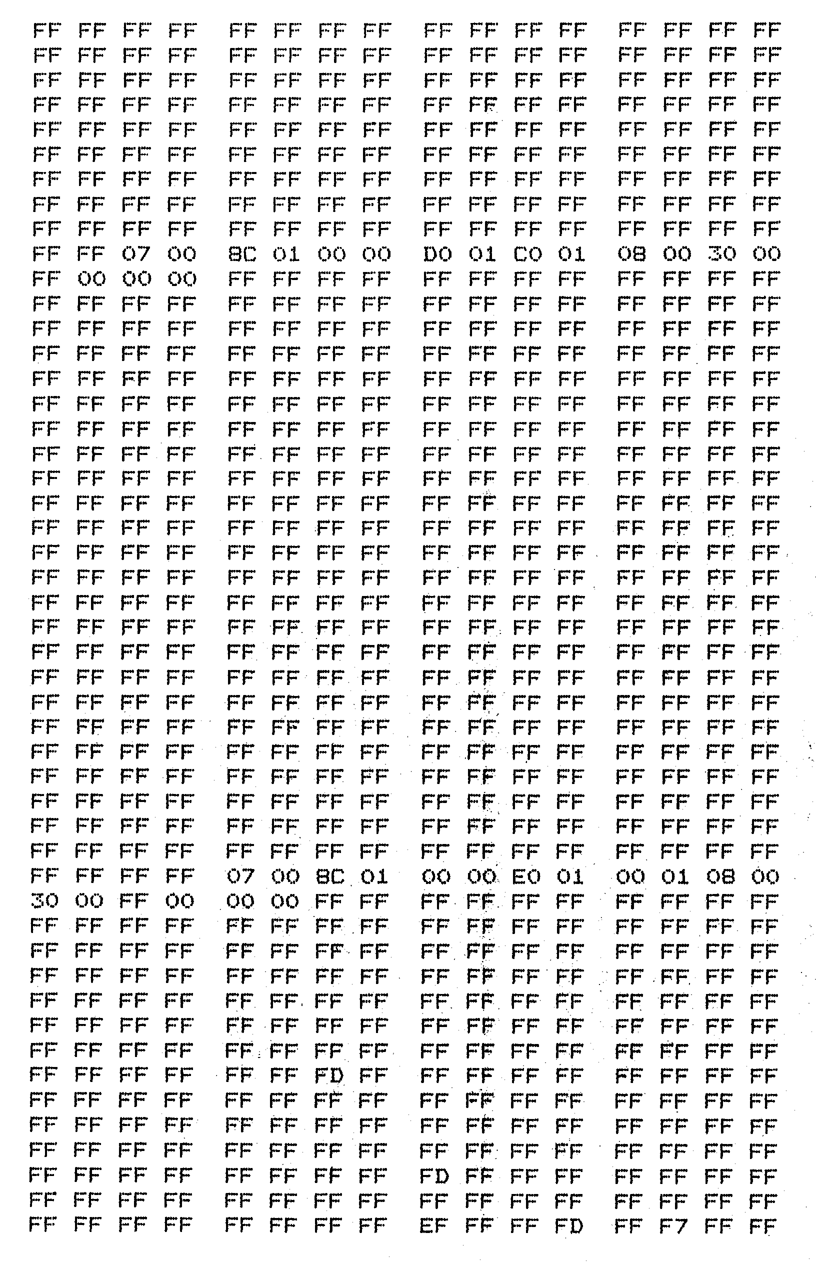

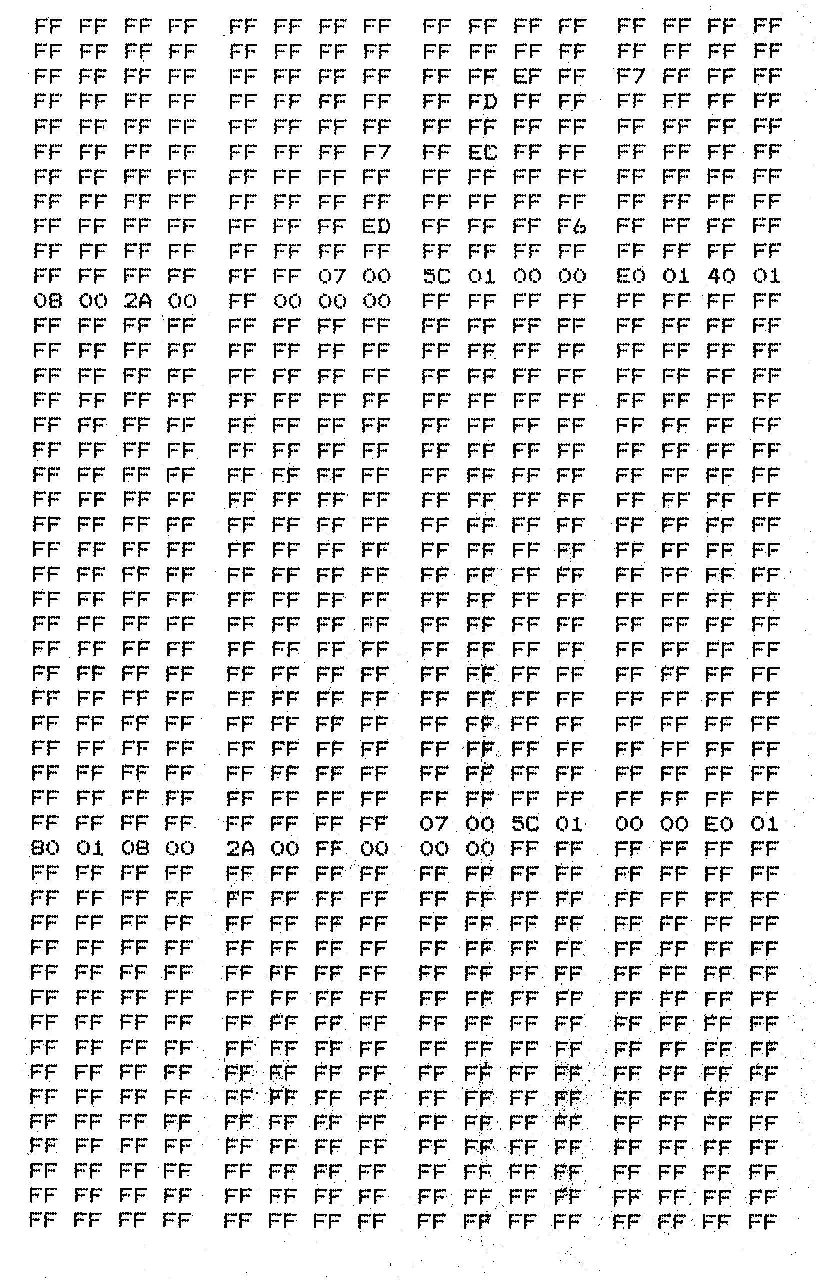

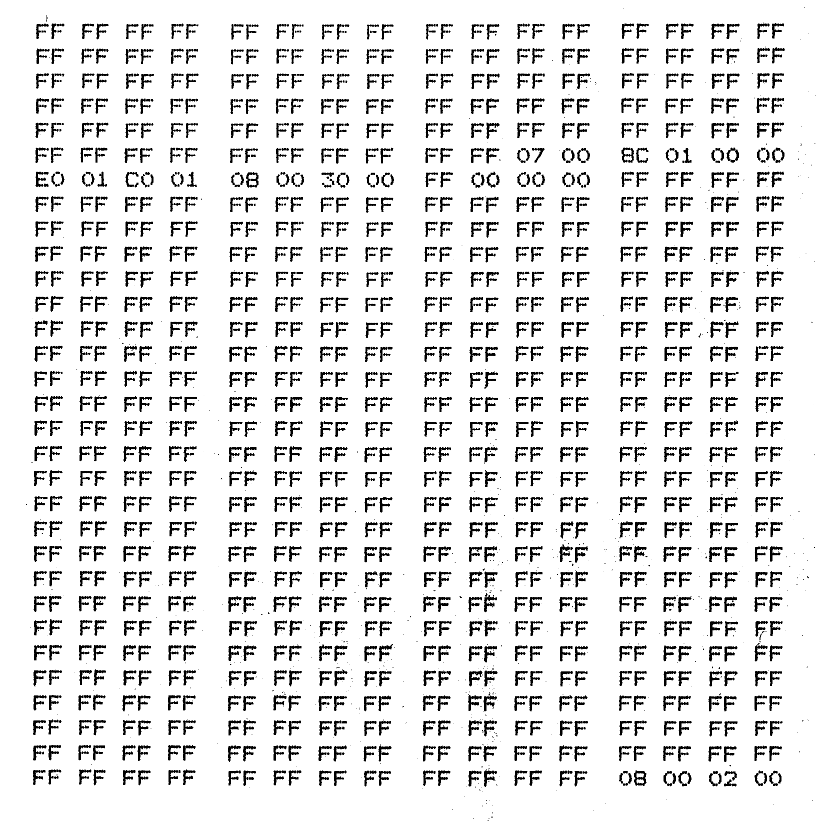

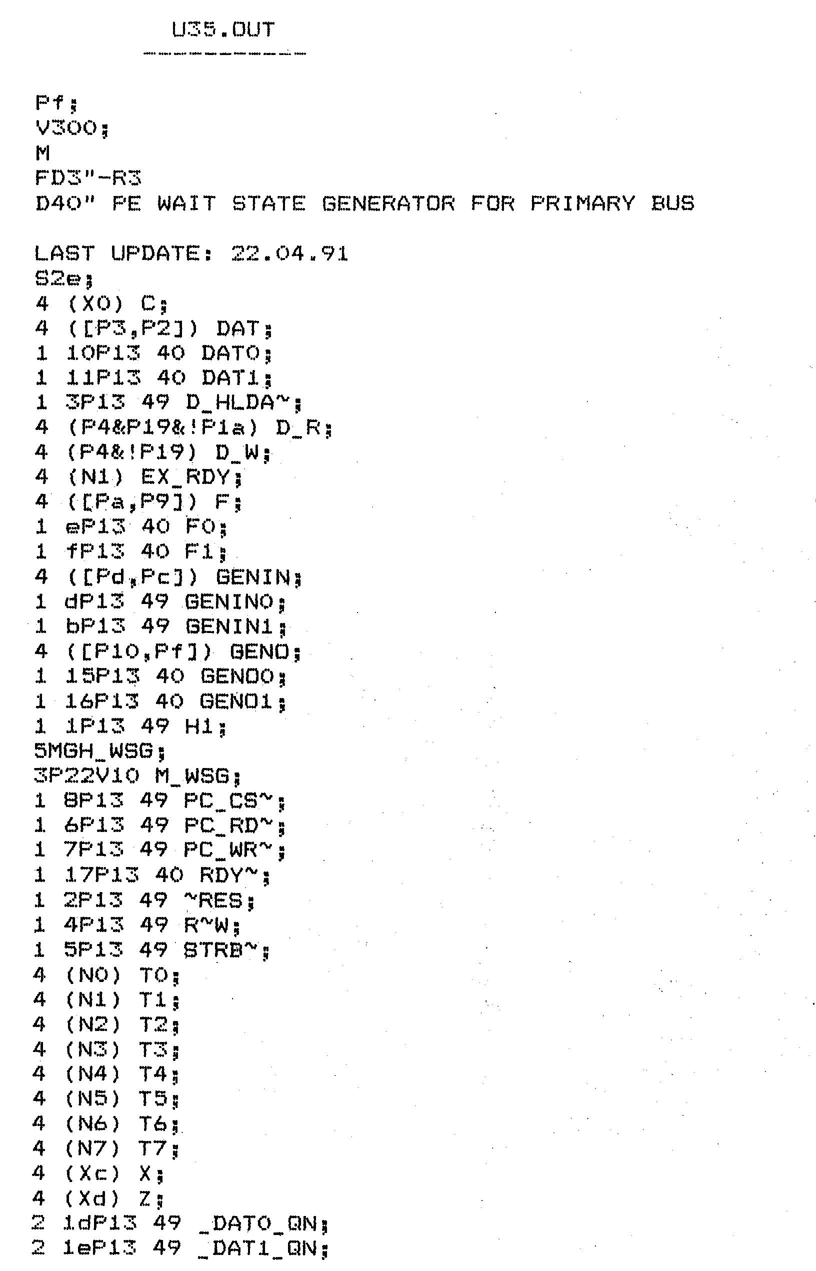

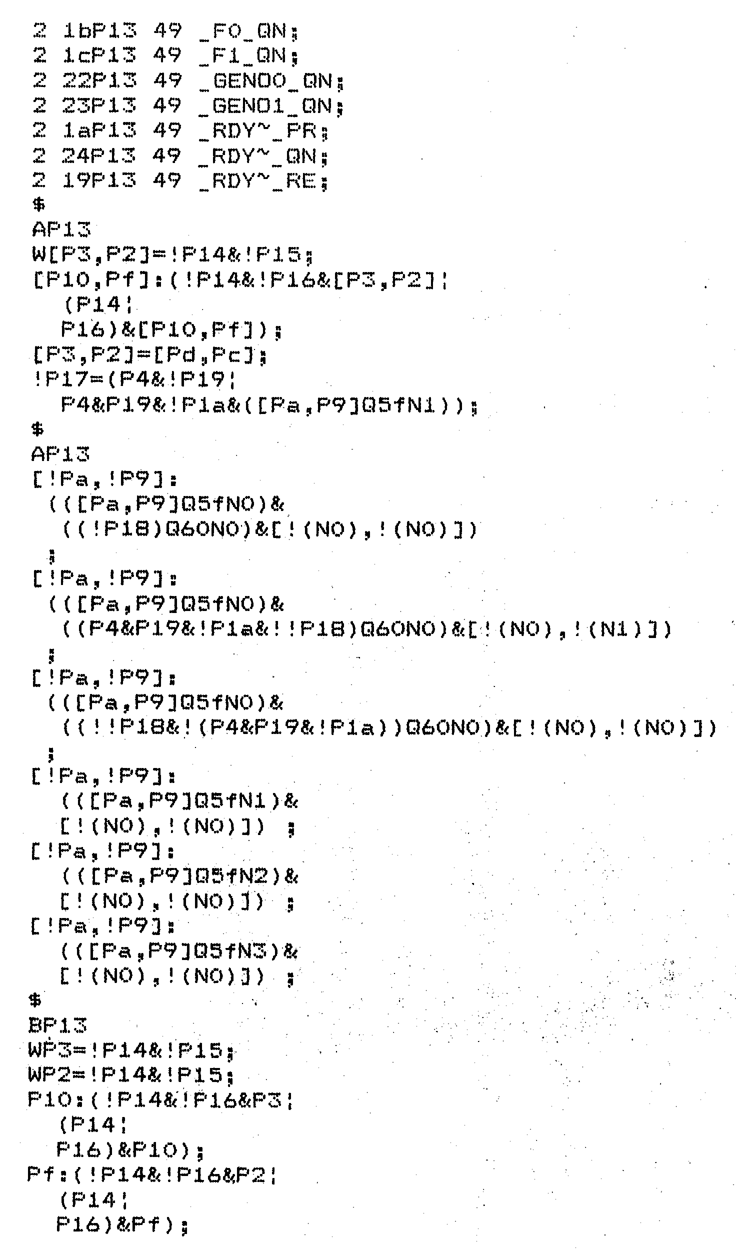

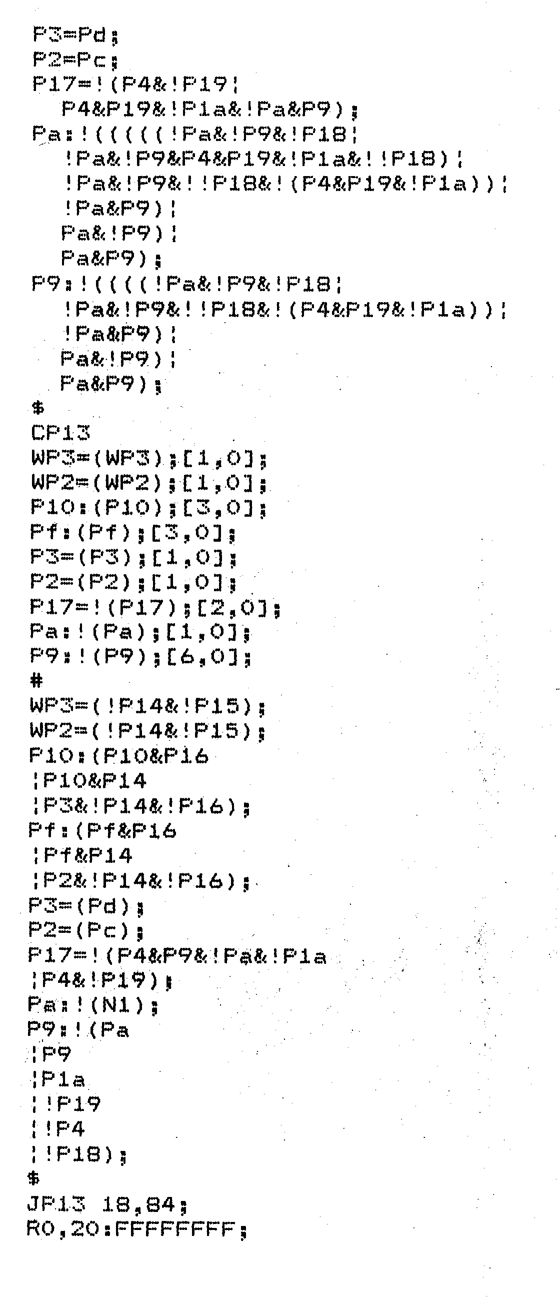

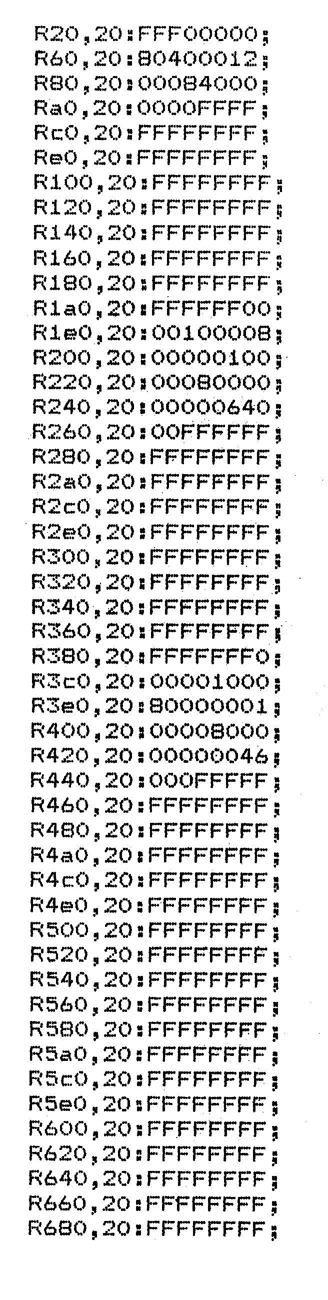

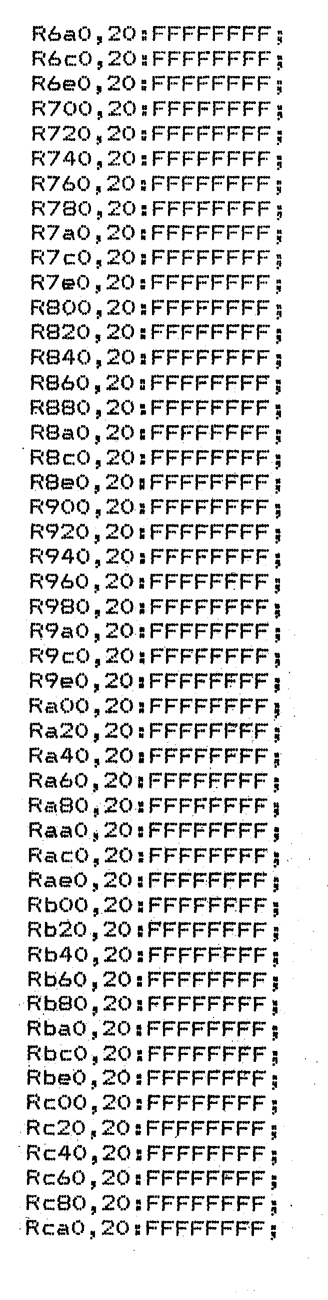

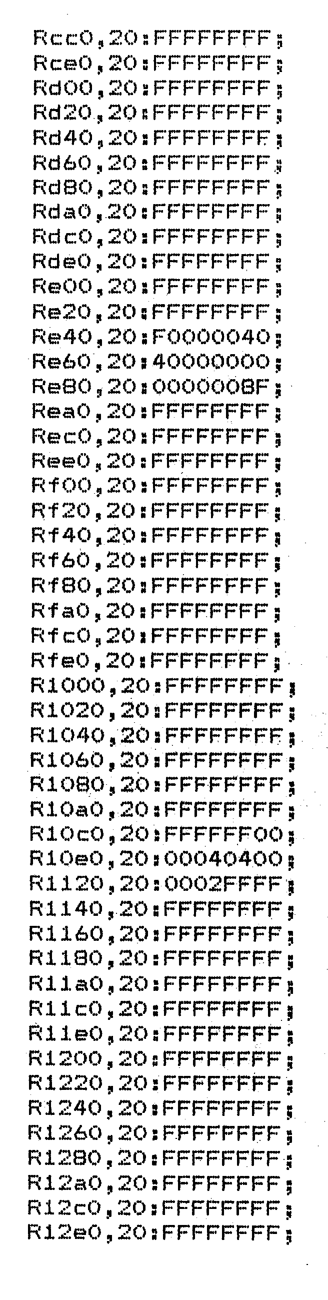

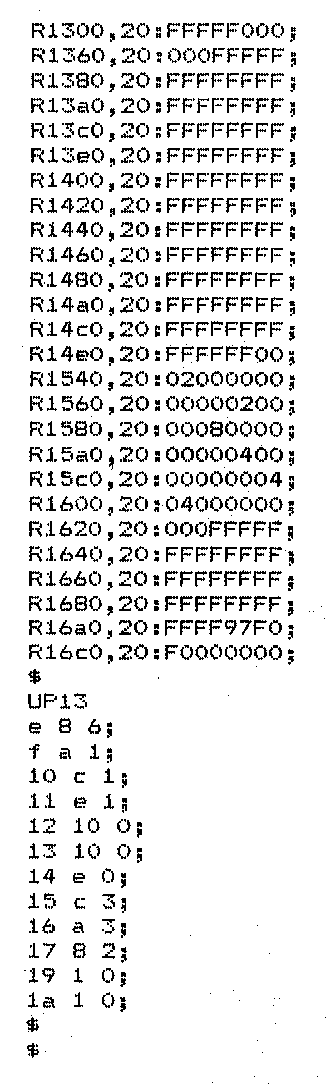

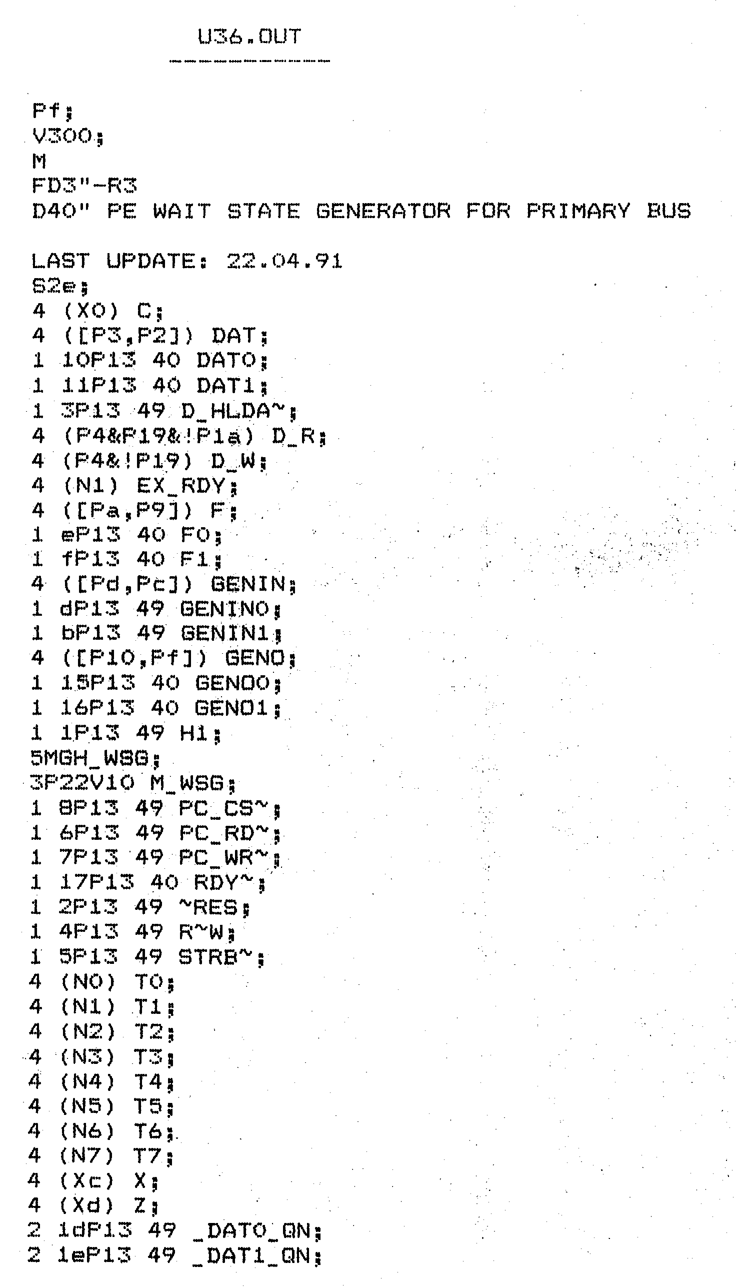

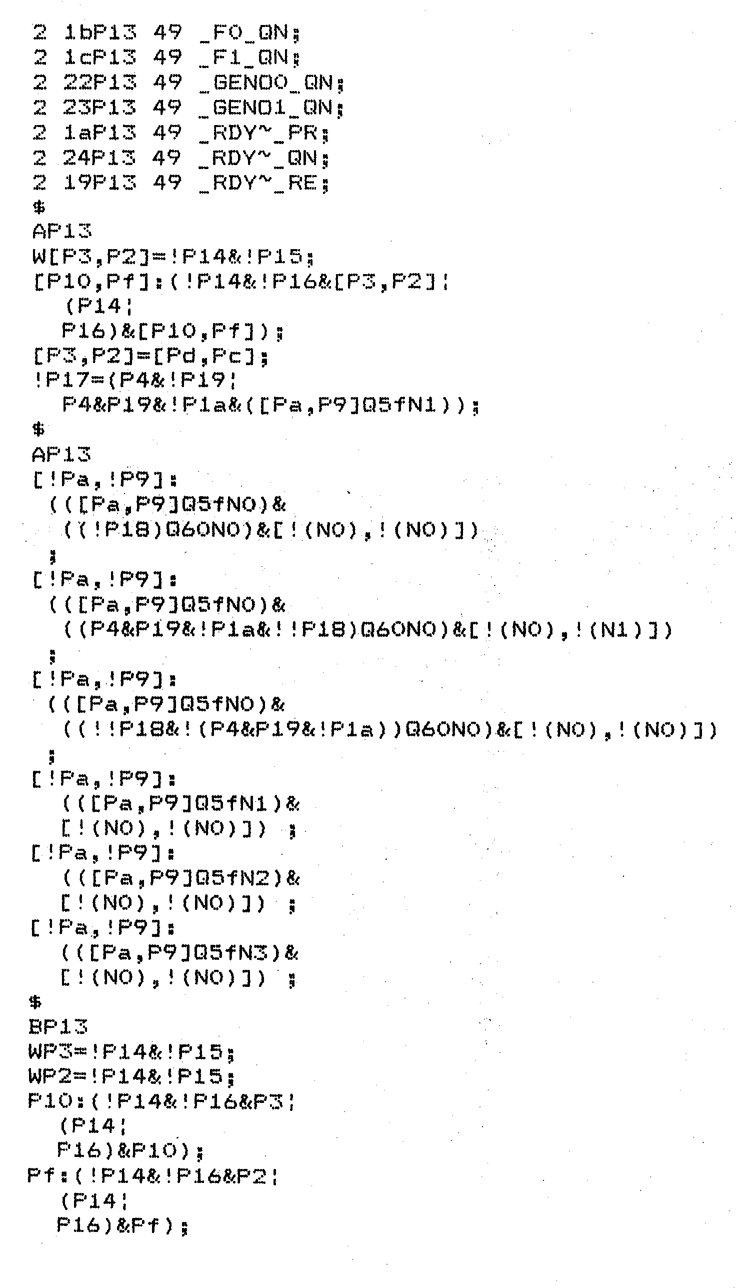

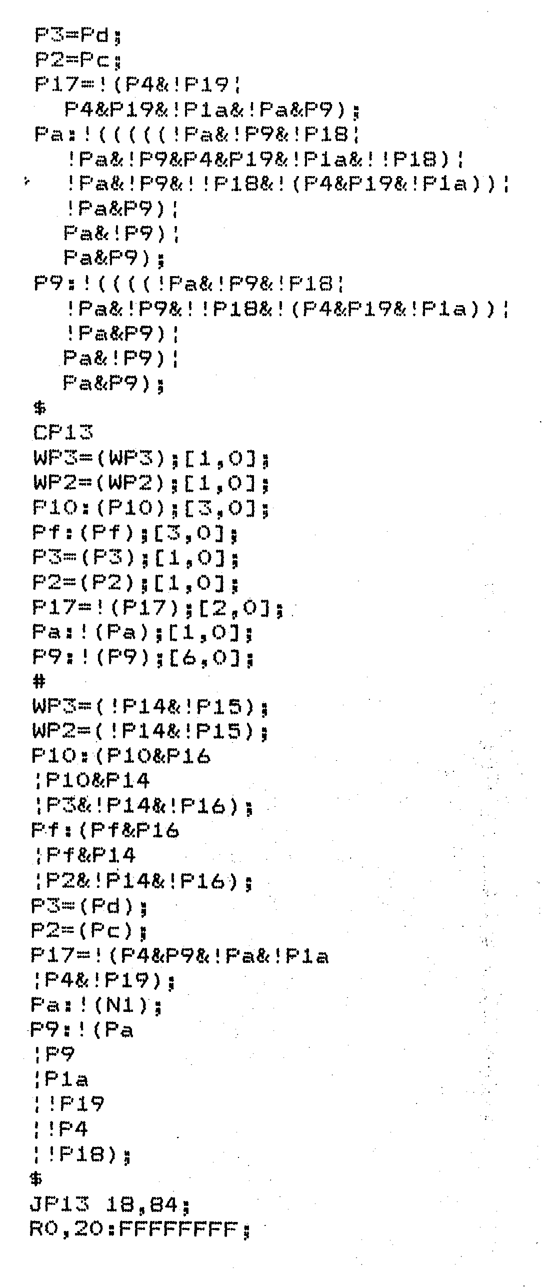

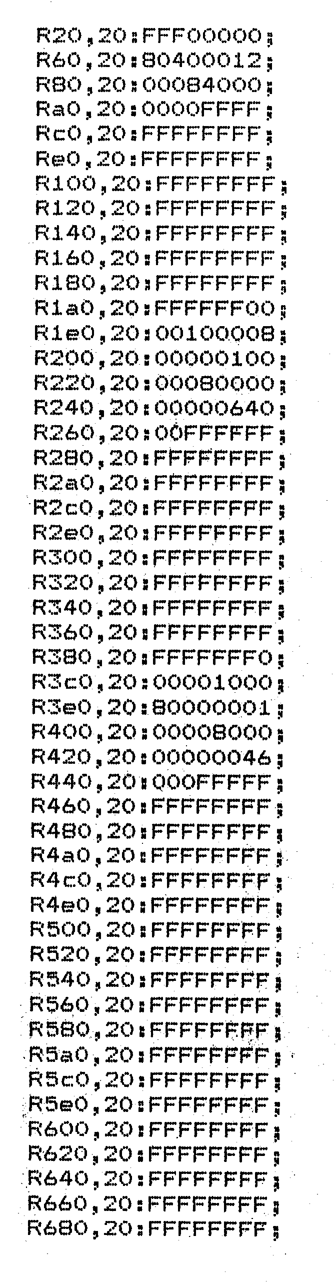

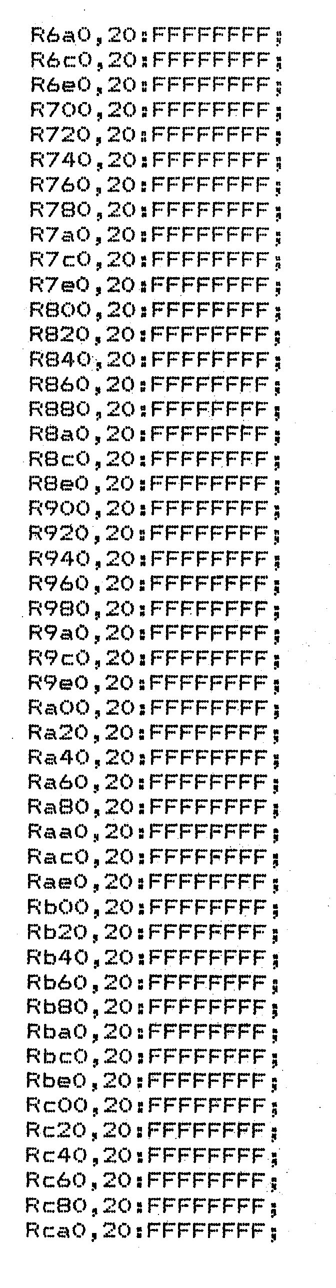

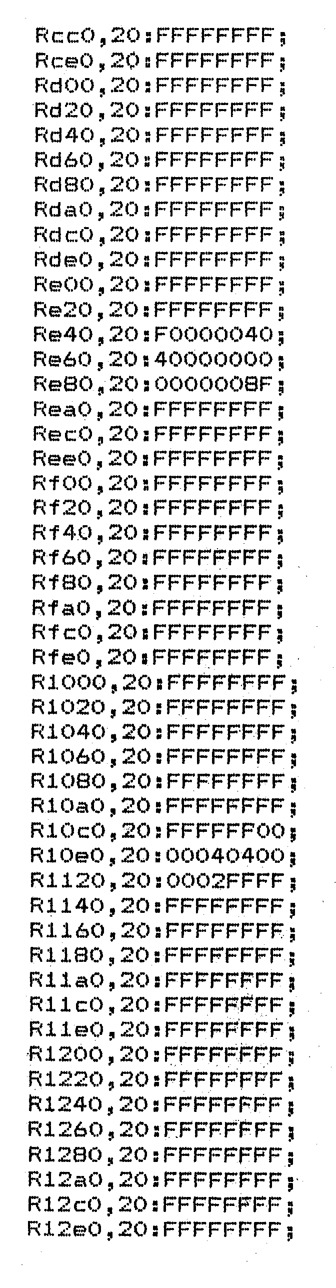

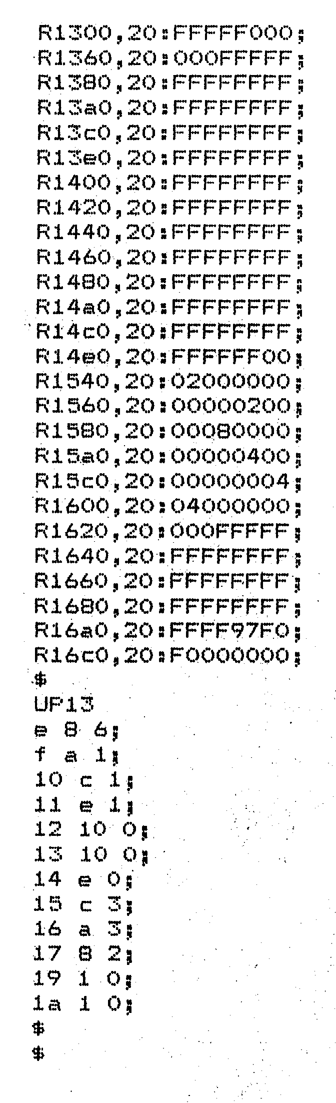

## Claims

1. A motion detection system comprising:
a motion direction definition receiver operative to accept a definition of at least one direction of motion; and
a moving object detector operative to detect an object only if it is moving in one of said at least one directions of motion.

2. A motion detection system comprising:
a motion parameter definition receiver operative to accept at least one reference object characteristic of a moving object and at least one reference motion characteristic of the motion of the moving object; and
a moving object detector operative to detect an object in motion, wherein at least one characteristic of the object corresponds to the at least one reference object characteristic and at least one characteristic of the motion corresponds to the at least one reference motion characteristic.

3. A motion detection system comprising:
a moving object detector operative to detect an object in motion, wherein at least one characteristic of the motion corresponds to at least one reference motion characteristic; and
a human intruder identifier for identifying a detected moving object as resembling a human intruder.

4. A motion tracking system comprising:
a representation of at least one scene from a site to be protected;
an intensity change detector for detecting changes in intensity in the representation of the at least one scene to be protected, over time;
a moving object identifier for identifying changes in intensity with predetermined characteristics, as a moving object;
an object tracker for tracking the moving object; and
trajectory display apparatus for displaying the trajectory of the moving object.

5. A motion detection system comprising:
a motion detector operative to detect motion within a sequence of images of a site to be protected; and
a faulty imaging analyzer operative to provide an output indication of faulty imaging of the site to be protected.

6. A motion tracking system comprising:
a representation of at least one scene of a site to be protected;
an intensity change detector for detecting changes in intensity in the representation of the scene to be protected, over time; and
a distance-to-camera dependent moving object identifier for identifying a change in intensity corresponding to at least one predetermined actual characteristic of the scene, as a moving object, wherein the relationship between the predetermined actual characteristic and the image thereof depends on the distance between the moving object and the camera.

7. A method for learning a scene of a site to be protected, the method comprising:
monitoring the scene to be protected during a motionless interval of time; and
characterizing locations in the scene according to the amount of motion detected therein.

8. A protected area monitoring camera replacement method comprising:
storing a first image of the protected area captured by a first camera;
replacing the first camera with a second camera;
conducting a comparison of a second image of the protected area captured by the second camera with the stored first image of the protected area captured by the first camera; and
aligning the second camera according to a result of the comparison.

9. A motion detection system comprising:
an image capturing unit;
a first decimator operative to reduce a first horizontal portion of a captured image to a first resolution;
a second decimator operative to reduce a second horizontal portion of the captured image which is above said first portion, to a second resolution which is higher than said first resolution; and
a motion detector operative to process the decimated first and second horizontal portions.

10. A motion detection system comprising:
an image capturing units operative to provide an image of a site to be protected including pixels of varying brightness; and
a brightness-sensitive motion detector which is sensitive in different degrees to motion in areas of different brightnesses.
